(19) Europäisches Patentamt
European Patent Office
Office européen des brevets

(11) EP 3 563 595 B1

(12) **EUROPEAN PATENT SPECIFICATION**

(45) Date of publication and mention of the grant of the patent:
**13.09.2023 Bulletin 2023/37**

(21) Application number: **17888538.0**

(22) Date of filing: **20.12.2017**

(51) International Patent Classification (IPC):
***H04W 4/029*** *(2018.01)* ***H04W 4/30*** *(2018.01)*
***H04W 48/18*** *(2009.01)* ***H04W 28/26*** *(2009.01)*
***H04W 76/28*** *(2018.01)* ***H04W 12/06*** *(2021.01)*
***H04W 88/06*** *(2009.01)* ***H04W 88/16*** *(2009.01)*
***H04W 88/18*** *(2009.01)* ***H04W 52/02*** *(2009.01)*
***G06F 9/48*** *(2006.01)* ***H04W 28/02*** *(2009.01)*
***H04W 4/021*** *(2018.01)* ***H04W 4/46*** *(2018.01)*
***H04W 8/00*** *(2009.01)* ***H04W 36/00*** *(2009.01)*
***H04W 74/08*** *(2009.01)* ***H04W 76/14*** *(2018.01)*
***H04W 88/04*** *(2009.01)* ***H04B 7/06*** *(2006.01)*

(52) Cooperative Patent Classification (CPC):
**H04W 52/0261; H04W 4/021; H04W 4/024; H04W 4/029; H04W 4/08; H04W 4/44; H04W 4/46; H04W 36/0009; H04W 48/18; H04W 52/0264; H04W 76/14;** H04B 7/0617; H04W 8/005; H04W 48/16; H04W 52/0216; (Cont.)

(86) International application number:
**PCT/US2017/067466**

(87) International publication number:
**WO 2018/125686 (05.07.2018 Gazette 2018/27)**

(54) **METHODS AND DEVICES FOR RADIO COMMUNICATIONS**

VERFAHREN UND VORRICHTUNGEN ZUR FUNKKOMMUNIKATION

PROCÉDÉS ET DISPOSITIFS POUR RADIOCOMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2016 US 201662440501 P**

(43) Date of publication of application:
**06.11.2019 Bulletin 2019/45**

(73) Proprietor: **Intel Corporation**
**Santa Clara, CA 95054 (US)**

(72) Inventors:
- **AZIZI, Shahrnaz**
  **Santa Clara, CA 95054 (US)**
- **BADIC, Biljana**
  **81825 Munich (DE)**
- **BROWNE, John**
  **Shannon (IE)**
- **CAVALCANTI, Dave**
  **Hillsboro, OR 97124 (US)**
- **CHOI, Hyung-nam**
  **22117 Hamburg (DE)**
- **CLEVORN, Thorsten**
  **81545 Munich (DE)**
- **GUPTA, Ajay**
  **Portland, OR 97229 (US)**
- **GUPTA, Maruti**
  **Portland, OR 97219 (US)**
- **HASHOLZNER, Ralph**
  **81739 Munich (DE)**
- **HIMATAT, Nageen**
  **Santa Clara, CA 95054 (US)**
- **HUNT, Simon**
  **Doral, FL 33178 (US)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- **KARLS, Ingolf**
  **85622 Feldkirchen (DE)**
- **KENNEY, Thomas**
  **Hillsboro, OR 97124 (US)**
- **LIAO, Yiting**
  **Santa Clara, CA 95054 (US)**
- **MACNAMARA, Chris**
  **Shannon (IE)**
- **MARTINEZ TARRADELL, Marta**
  **Hillsboro, OR 97124 (US)**
- **MUECK, Markus, Dominik**
  **82008 Unterhaching (DE)**
- **NALLAMPATTI EKAMBARAM, Venkatesan**
  **Hillsboro, OR 97124 (US)**
- **POWER, Niall**
  **Shannon (IE)**
- **RAAF, Bernhard**
  **82061 Neuried (DE)**
- **SCHNEIDER, Reinhold**
  **95087 Veitsbronn, BY (DE)**
- **SINGH, Ashish**
  **85579 Neubiberg (DE)**
- **SINGH, Sarabjot**
  **Santa Clara, California 95054 (US)**
- **SRIKANTESWARA, Srikathyayani**
  **Portland, Oregon 97229 (US)**
- **TALWAR, Shilpa**
  **Los Altos, California 94024 (US)**
- **XUE, Feng**
  **Redwood City, CA 94065 (US)**
- **YU, Zhibin**
  **82008 Unterhaching (DE)**
- **ZAUS, Robert**
  **80686 München (DE)**
- **FRANZ, Stefan**
  **81379 Munich (DE)**
- **KLIEMANN, Uwe**
  **91126 Rednitzhembach (DE)**
- **DREWES, Christian**
  **82110 Germering (DE)**
- **KREUCHAUF, Juergen**
  **San Francisco, California 94107 (US)**

(74) Representative: **Viering, Jentschura & Partner mbB**
**Patent- und Rechtsanwälte**
**Am Brauhaus 8**
**01099 Dresden (DE)**



(56) References cited:

| | |
|---|---|
| **WO-A1-2007/145625** | **US-A1- 2004 085 909** |
| **US-A1- 2009 210 741** | **US-A1- 2010 313 203** |
| **US-A1- 2014 177 496** | **US-A1- 2015 038 156** |
| **US-A1- 2015 222 708** | **US-A1- 2015 281 303** |
| **US-A1- 2016 037 379** | **US-B1- 6 823 516** |

- **NITHI NACHI K ET AL: "Smart power management for mobile handsets", BELL LABS TECHNICAL JOURNAL, WILEY, CA, US, vol. 15, no. 4, 1 March 2011 (2011-03-01), pages 149-168, XP011628057, ISSN: 1089-7089, DOI: 10.1002/BLTJ.20478 [retrieved on 2014-03-15]**



(52) Cooperative Patent Classification (CPC): (Cont.)
H04W 74/0816; H04W 84/005; H04W 88/04;
H04W 88/06; Y02D 30/70

## Description

### Cross-Reference to Related Applications

This application claims priority to US Patent Application Serial No. 62/440,501, which was filed December 30, 2016.

### Technical Field

Various aspects relate generally to methods and devices for radio communications.

### Background

End-to-end communication networks may include radio communications networks as well as wireline communication networks. Radio communication networks may include network access nodes (e.g., base stations, access points, etc.), and terminal devices (e.g., mobile phones, tablets, laptops, computers, Internet of Things (IoT) devices, wearables, implantable devices, machine-type communication devices, etc., and vehicles (e.g., cars, trucks, buses, bicycles, robots, motorbikes, trains, ships, submarines, drones, airplanes, balloons, satellites, spacecraft), machine-type communication devices, etc.) and may provide a radio access network for such terminal devices to communicate with other terminal devices or access various networks via the network access nodes. For example, cellular radio communication networks may provide a system of cellular base stations that serve terminal devices within an area to provide communication to other terminal devices or radio access to applications and services such as voice, text, multimedia, Internet, etc., while short-range radio access networks such as Wireless Local Area Network (WLAN) networks may provide a system of WLAN access points (APs) that may provide access to other terminal devices within the WLAN network or other networks such as a cellular network or a wireline communication networks.

The publication "Smart power management for mobile handsets" from NITHI NACHI K et al of BELL LABS TECHNICAL JOURNAL, WILEY, CA, US, vol. 15, no. 4, 1 March 2011 pages 149-168 XP011628057, ISSN: 1089-7089, DOI: 10.1002/BLTJ.20478 discloses a terminal based power manager to be used in a mobile terminal, which the terminal based power manager includes a power-aware monitoring module to monitor the tasks and a power-aware task scheduler to schedule the tasks. Document US 2014/177496 A1 discloses a communication device which is able to adjust its transmission power for critical and non-critical application on the communication device, where said transmission power (low power, high power) is based on the priority of the respective applications, whereby the battery of the communication device is conserved.

### Summary

One of the aspects of the patent application relates to a non-transitory computer readable medium storing instructions that, when executed by one or more processors of a communication device, cause the processors to perform the steps of: determining that the communication device is in a scenario based on a battery power of the communication device; classifying, data from one or more applications of the communication device into a plurality of priorities, wherein classifying data into the plurality of priorities comprises classifying data from a highest priority to a lowest priority based on use of the one or more applications during an extended time period; and throttling the data from the one or more applications based on their respective priorities while the communication device is in the scenario, wherein throttling the data comprises transmitting the lowest priority data with a longer transmission delay than the highest priority data. The invention is disclosed in the appended claims.

### Brief Description of the Drawings

In the drawings, like reference characters generally refer to the same parts throughout the different views. The drawings are not necessarily to scale. Instead, the drawings generally emphasize one or more features. In the following description, various aspects of the disclosure are described with reference to the following drawings, in which:

FIG. **1** shows an exemplary radio communication system including terminal devices, terminal devices also acting as access nodes, wireless links and standards, network access nodes, servers, gateways/interchanges and backbone infrastructures in accordance with some aspects;
FIG. **2** shows a network scenario including terminal devices and network access nodes related to an exemplary discovery information scheme such as common discovery channel scheme in accordance with some aspects;
FIG. **3** shows an internal configuration of an exemplary terminal device in accordance with some aspects;

FIG. **4** shows an internal configuration of an exemplary common discovery module in accordance with some aspects;
FIG. **5** shows a method for performing radio access communications using an exemplary common discovery channel scheme in accordance with some aspects;
FIG. **6** shows a first internal configuration of an exemplary network access node in accordance with some aspects;
FIG. **7** shows an exemplary method of providing discovery signals on a common discovery channel scheme in accordance with some aspects;
FIG. **8** shows a first exemplary network scenario with an external database for storing discovery information in accordance with some aspects;
FIG. **9** shows a second exemplary network scenario with an external database for storing discovery information in accordance with some aspects;
FIG. **10** shows an exemplary method of performing radio communications in connection with a common discovery channel scheme in accordance with some aspects;
FIG. **11** shows an exemplary network scenario including terminal devices and network access nodes related to a forwarding and common monitoring scheme in accordance with some aspects;
FIG. **12** shows a second exemplary internal configuration of a network access node in accordance with some aspects;
FIG. **13** shows a first exemplary method of performing radio communications in connection with a forwarding and common monitoring scheme in accordance with some aspects;
FIG. **14** shows a second exemplary method of performing radio communications in connection with a forwarding and common monitoring scheme in accordance with some aspects;
FIG. **15** shows an exemplary radio communication network in accordance with some aspects;
FIG. **16** shows an exemplary internal configuration of a terminal device in accordance with some aspects;
FIG. **17** shows a first exemplary time-frequency resource grid for radio communications in accordance with some aspects;
FIG. **18** shows an exemplary transport-to-physical channel mapping in accordance with some aspects;
FIG. **19** shows a second exemplary time-frequency resource grid for radio communications in accordance with some aspects;
FIG. **20** shows an exemplary network scenario for a radio communication network in accordance with some aspects;
FIG. **21** shows a third exemplary time-frequency resource grid for radio communications in accordance with some aspects;
FIG. **22** shows a fourth exemplary time-frequency resource grid for radio communications in accordance with some aspects;
FIG. **23** shows an exemplary method related to selecting between available channel instances in accordance with some aspects;
FIG. **24** shows an exemplary internal configuration of a terminal device with a low power radio access system in accordance with some aspects;
FIG. **25** shows an exemplary method related to providing multiple channel instances in accordance with some aspects;
FIG. **26** shows an exemplary internal configuration of a network access node in accordance with some aspects;
FIG. **27** shows an exemplary method for providing channel configuration information to requesting terminal devices in accordance with some aspects;
FIG. **28** shows an exemplary message sequence chart related to a procedure for selecting and attaching to a channel instance in accordance with some aspects;
FIG. **29** shows an exemplary method for operating a terminal device in accordance with some aspects;
FIG. **30** shows an exemplary method for operating one or more network access nodes in accordance with some aspects;
FIG. **31** shows an exemplary method for selecting a random access transmission power in accordance with some aspects;
FIG. **32** shows an exemplary internal configuration of a physical layer processing module using modularization in accordance with some aspects;
FIG. **33** shows an exemplary message sequence chart related to a procedure for arranging a scheduling setting for a modularized physical layer processing module in accordance with some aspects;
FIG. **34** shows an exemplary method for operating a communication module arrangement in accordance with some aspects;
FIG. **35** shows a first exemplary internal configuration of a terminal device in accordance with some aspects;
FIG. **36** shows a second exemplary internal configuration of a terminal device in accordance with some aspects;
FIG. **37** shows a third exemplary internal configuration of a terminal device in accordance with some aspects;
FIG. **38** shows a fourth exemplary internal configuration of a terminal device in accordance with some aspects;
FIG. **39** shows an exemplary internal configuration of a receiver module and transmitter module in accordance with some aspects;

FIG. **40** shows an exemplary internal configuration of a receiver module in accordance with some aspects;

FIG. **41** shows an exemplary internal configuration of a receiver module for a demodulator application in accordance with some aspects;

FIG. **42** shows an exemplary illustration of operation of a control module in accordance with some aspects;

FIG. **43** shows a method of operating a communication system in accordance with some aspects;

FIG. **44** shows an exemplary radio communication network that illustrates a data bearer in accordance with some aspects;

FIG. **45** shows an exemplary internal configuration of a terminal device in a reception setting in accordance with some aspects;

FIG. **46** shows a first mapping of data from different data bearers to different receiver modules in accordance with some aspects;

FIG. **47** shows a second mapping of data from different data bearers to different receiver modules in accordance with some aspects;

FIG. **48** shows a third mapping of data from different data bearers to different receiver modules in accordance with some aspects;

FIG. **49** shows a fourth mapping of data from different data bearers to different receiver modules in accordance with some aspects;

FIG. **50** shows a fifth mapping of data from different data bearers to different receiver modules in accordance with some aspects;

FIG. **51** shows an exemplary distribution of data across different carriers of a carrier aggregation scheme in accordance with some aspects;

FIG. **52** shows a sixth mapping of data from different data bearers to different receiver modules in accordance with some aspects;

FIG. **53** shows a seventh mapping of data from different data bearers to different receiver modules in accordance with some aspects;

FIGs. **54A** and **54B** show various exemplary internal configuration of a terminal device in a transmission setting in accordance with some aspects;

FIG. **55** shows a first exemplary method of performing radio communications in accordance with some aspects;

FIG. **56** shows a second exemplary method of performing radio communications in accordance with some aspects;

FIG. **57** shows a first exemplary depiction of a relationship between radio resource allocation and power consumption in accordance with some aspects;

FIG. **58** shows an exemplary internal configuration of a network access node in accordance with some aspects;

FIG. **59** shows a second exemplary depiction of a relationship between radio resource allocation and power consumption in accordance with some aspects;

FIG. **60** shows an exemplary depiction of a network node that performs processing in accordance with some aspects;

FIG. **61** shows an exemplary method of operating a network processor in accordance with some aspects;

FIG. **62** shows an exemplary internal configuration of a network access node in accordance with some aspects;

FIG. **63** shows various exemplary charts illustrating retransmission notification turnaround times in accordance with some aspects;

FIG. **64** shows an exemplary method of operating a network processing module in accordance with some aspects;

FIG. **65** shows a first exemplary network scenario in accordance with some aspects;

FIG. **66** shows an exemplary internal depiction of a control module for a network access node in accordance with some aspects;

FIG. **67** shows various exemplary transmission and reception schedules in accordance with some aspects;

FIG. **68** shows a second exemplary network scenario in accordance with some aspects;

FIGs. **69A** and **69B** show various transmission and reception schedules using discontinuous transmission and/or reception in accordance with some aspects;

FIG. **70** shows a first exemplary method of performing radio communications in accordance with some aspects;

FIG. **71** shows a second exemplary method of performing radio communications in accordance with some aspects;

FIG. **72** shows an exemplary network scenario in accordance with some aspects using a network access node;

FIG. **73** shows an exemplary message sequence chart illustrating connection continuity services using a network access node in accordance with some aspects;

FIG. **74** shows an exemplary network scenario in accordance with some aspects using an edge computing server;

FIG. **75** shows an exemplary message sequence chart illustrating connection continuity services using an edge computing server in accordance with some aspects;

FIG. **76** shows an exemplary method of performing radio communications at a terminal device in accordance with some aspects;

FIG. **77** shows an exemplary method of performing radio communication at a network processing component in accordance with some aspects;
FIG. **78** shows an exemplary network scenario in accordance with some aspects;
FIG. **79** shows an exemplary message sequence chart illustrating connection continuity services for a group of terminal devices in accordance with some aspects;
FIG. **80** shows an exemplary method for performing radio communications in accordance with some aspects;
FIG. **81** shows an exemplary method for performing radio communications in accordance with some aspects;
FIG. **82** shows an exemplary network scenario in accordance with some aspects;
FIG. **83** shows an exemplary internal configuration of a network access node in accordance with some aspects;
FIG. **84** shows an exemplary internal configuration of an autonomous moving device in accordance with some aspects;
FIG. **85** shows an exemplary message sequence chart related to a procedure for selecting sensitivity levels for navigation sensors at autonomous moving devices in accordance with some aspects;
FIG. **86** shows an exemplary network scenario using an external sensor network in accordance with some aspects;
FIG. **87** shows an exemplary network scenario using multiple network access nodes with respective cells in accordance with some aspects;
FIG. **88** shows an exemplary network scenario using planned routes of autonomous moving devices in accordance with some aspects;
FIG. **89** shows an exemplary network scenario using a master autonomous moving device in accordance with some aspects;
FIG. **90** shows an exemplary method of operating a moving device in accordance with some aspects;
FIG. **91** shows an exemplary radio communication network in accordance with some aspects;
FIG. **92** shows an exemplary internal configuration of a terminal device in accordance with some aspects;
FIG. **93** shows an exemplary internal configuration of a network access node in accordance with some aspects;
FIG. **94** shows an exemplary depiction of uses for context information at different platforms of a terminal device in accordance with some aspects;
FIG. **95** shows a road travel scenario in accordance with some aspects;
FIG. **96** shows an exemplary implementation of a terminal device in accordance with some aspects;
FIG. **97** shows an exemplary method at a terminal device in accordance with some aspects;
FIG. **98** shows an exemplary depiction of network scan timing results in accordance with some aspects;
FIG. **99** shows an exemplary application in a road travel scenario with multiple network access nodes in accordance with some aspects;
FIG. **100** shows an exemplary method of controlling radio activity based on a historical sequence of radio conditions and other context information in accordance with some aspects;
FIG. **101** shows an exemplary method of performing radio communications in accordance with some aspects;
FIG. **102** shows an exemplary implementation of a terminal device and network access node in accordance with some aspects;
FIG. **103** shows an exemplary configuration of terminal device prediction and decision modules in accordance with some aspects;
FIG. **104** shows an exemplary configuration of network access node prediction and decision modules in accordance with some aspects;
FIG. **105** shows an exemplary message sequence chart detailing interaction between terminal device and network access node predication and decision modules in accordance with some aspects;
FIG. **106** shows an exemplary method making spectrum allocation decisions in accordance with some aspects;
FIG. **107** shows an exemplary implementation of a cloud-based infrastructure in accordance with some aspects;
FIG. **108** shows an exemplary internal configuration of local and cloud prediction and decision modules in accordance with some aspects;
FIG. **109** shows various exemplary message formats for crowdsourcing context information in accordance with some aspects;
FIG. **110** shows a first exemplary method of performing radio communications in accordance with some aspects;
FIG. **111** shows a second exemplary method of performing radio communications in accordance with some aspects;
FIG. **112** shows an exemplary network scenario for managing an IoT network in accordance with some aspects;
FIG. **113** shows an exemplary internal configuration of a gateway device in accordance with some aspects;
FIG. **114** shows an exemplary method at an IoT node to perform radio measurements and detect networks in accordance with some aspects;
FIG. **115** shows an exemplary internal configuration of a baseband modem for an IoT node in accordance with some aspects;
FIG. **116** shows an exemplary method at a gateway device to collect radio measurements and reconfigure a wireless network in accordance with some aspects;
FIG. **117** shows an exemplary method of managing a wireless multi-hop network in accordance with some aspects;
FIG. **118** shows an exemplary method of performing radio communications according to some aspects;
FIG. **119** shows an exemplary scenario for beamsteering with vehicular targets in accordance with some aspects;
FIG. **120** shows an exemplary internal configuration of control module for a network access node in accordance with some aspects;
FIG. **121** shows an exemplary method of performing beamsteering for vehicular targets in accordance with some aspects;
FIG. **122** shows an exemplary scenario in which a vehicle can bock another vehicle in accordance with some aspects;
FIG. **123** shows an exemplary scenario for radio access technology switching in accordance with some aspects;
FIG. **124** shows an exemplary scenario with aerial drones in accordance with some aspects;
FIG. **125** shows an exemplary method of performing radio communications according to some aspects;
FIG. **126** shows an exemplary network architecture in accordance with some aspects;
FIG. **127** shows an exemplary positioning of network access nodes for distributing radio environmental map (REM) data storage in accordance with some aspects;
FIG. **128** shows an exemplary internal configuration of a distributed REM server in accordance with some aspects;
FIG. **129** shows an exemplary message sequence chart illustrating a request-response mechanism for REM data in accordance with some aspects;
FIG. **130** shows an exemplary table related to a two-dimension framework for requesting REM data based on device capabilities and context information detail level in accordance with some aspects;
FIG. **131** shows a first exemplary method for managing REM data in a distributed manner in accordance with some aspects;
FIG. **132** shows a second exemplary method for managing REM data in accordance with some aspects;
FIG. **133** shows an exemplary plot of bursty traffic periods in accordance with some aspects;
FIG. **134** shows an exemplary method for triggering semi-persistent scheduling (SPS) based on predicted user traffic patterns in accordance with some aspects;
FIG. 135 shows an exemplary method of controlling scheduling decisions based on detection of non-compliant terminal device behavior in accordance with some aspects;
FIG. **136** shows an exemplary radio communication network in accordance with some aspects;
FIG. **137** shows an exemplary internal configuration of a terminal device in accordance with some aspects;
FIG. **138** shows an exemplary internal configuration of a network access node in accordance with some aspects;
FIG. **139** shows an exemplary end-to-end network architecture in accordance with some aspects;
FIG. **140** shows an exemplary end-to-end network architecture with network slicing in accordance with some aspects;
FIG. **141** shows an exemplary internal configuration of a terminal device in accordance with some aspects;
FIG. **142** shows an exemplary message sequence chart illustrating a message exchange between a terminal device and a core network for network slice selection in accordance with some aspects;
FIG. **143** shows a first exemplary method of performing radio communications in accordance with some aspects;
FIG. **144** shows a second exemplary method of performing radio communications in accordance with some aspects;
FIG. **145** shows a third exemplary method of performing radio communications in accordance with some aspects;
FIG. **146** shows an exemplary end-to-end network architecture with an edge computing server and charging server in accordance with some aspects;
FIG. **147** shows an exemplary internal configuration of an edge computing server in accordance with some aspects;
FIG. **148** shows an exemplary message sequence chart illustrating a message exchange between a terminal device, edge computing server, and charging server in accordance with some aspects;
FIG. **149** shows a first exemplary method of managing a data stream in accordance with some aspects;
FIG. **150** shows a second exemplary method of managing a data stream according in accordance with some aspects;
FIG. **151** shows an exemplary internal configuration of a terminal device in accordance with some aspects;
FIG. **152** shows a first exemplary message sequence chart illustrating a message exchange between a terminal device and a network access node in accordance with some aspects;
FIG. **153** shows a second exemplary message sequence chart illustrating a message exchange between a terminal device and a network access node in accordance with some aspects;
FIG. **154** shows a third exemplary message sequence chart illustrating a message exchange between a terminal device and a network access node in accordance with some aspects;
FIG. **155** shows an exemplary priority curve illustrating a service disabling priority in accordance with some aspects;
FIG. **156** shows an exemplary message sequence chart illustrating progressive service disablement in accordance with some aspects;
FIG. **157** shows a first exemplary method of performing radio communications in accordance with some aspects;
FIG. **158** shows a second exemplary method of performing radio communications in accordance with some aspects;

FIG. **159** shows an exemplary internal configuration of a terminal device in accordance with some aspects;
FIG. **160** shows an exemplary method of detecting and responding to thermal-constrained scenarios with throttling at a terminal device in accordance with some aspects;
FIG. **161** shows an exemplary method of detecting and responding to power-constrained scenarios with throttling at a terminal device in accordance with some aspects;
FIG. **162** shows an exemplary method of detecting and responding to thermal-constrained and/or power-constrained scenarios with throttling at a terminal device in accordance with some aspects;
FIG. **163** shows an exemplary configuration of a terminal device in accordance with some aspects;
FIG. **164** shows an exemplary method of performing radio communications in accordance with some aspects;
FIG. **165** shows an exemplary radio communication network in accordance with some aspects;
FIG. **166** shows an exemplary internal configuration of a terminal device in accordance with some aspects;
FIG. **167** shows an exemplary internal configuration of a network access node in accordance with some aspects;
FIG. **168** shows an exemplary end-to-end network architecture in accordance with some aspects;
FIG. **169** shows an exemplary network scenario in accordance with some aspects;
FIG. **170** shows an exemplary internal configuration of an assisting device in accordance with some aspects;
FIG. **171** shows an interactional diagram between terminal devices, network access nodes, and assisting device in accordance with some aspects;
FIG. **172** shows a first exemplary message sequence chart depicting interaction between a terminal device, an assisting device, and a network access node in accordance with some aspects;
FIG. **173** shows a second exemplary message sequence chart depicting interaction between a terminal device, an assisting device, and a network access node in accordance with some aspects;
FIG. **174** shows a third exemplary message sequence chart depicting interaction between a terminal device, an assisting device, and a network access node in accordance with some aspects;
FIG. **175** shows a fourth exemplary message sequence chart depicting interaction between a terminal device, an assisting device, and a network access node in accordance with some aspects;
FIG. **176** shows a fifth exemplary message sequence chart depicting interaction between a terminal device, an assisting device, and a network access node in accordance with some aspects;
FIG. **177** shows an exemplary network scenario involving support of multiple terminal devices by an assisting device in accordance with some aspects;
FIG. **178** shows an exemplary application of an Internet of Things (IoT) setting in accordance with some aspects;
FIG. **179** shows a first exemplary method of performing radio communications at a terminal device in accordance with some aspects;
FIG. **180** shows a second exemplary method of performing radio communications at a communication device in accordance with some aspects;
FIG. **181** shows a third exemplary method of performing radio communications at a communication device in accordance with some aspects;
FIG. **182** shows a first exemplary network scenario in accordance with some aspects of this disclosure;
FIG. **183** shows an exemplary internal configuration of a vehicle network access node in accordance with some aspects;
FIG. **184** shows a first exemplary message sequence chart illustrating prediction and pre-loading of target data for a terminal device in accordance with some aspects;
FIG. **185** shows a second exemplary message sequence chart illustrating prediction and pre-loading of target data for a terminal device in accordance with some aspects;
FIG. **186** shows a second exemplary network scenario in accordance with some aspects;
FIG. **187** shows an exemplary network scenario depicting terminal device and network access node connections in accordance with some aspects;
FIG. **188** shows a third exemplary message sequence chart illustrating prediction and pre-loading of target data for a terminal device in accordance with some aspects;
FIG. **189** shows a first exemplary method of performing radio communications at a local network access node of a vehicle in accordance with some aspects;
FIG. **190** shows a second exemplary method of performing radio communications at a local network access node of a vehicle in accordance with some aspects;
FIG. **191** shows an exemplary radio communication network in accordance with some aspects;
FIG. **192** shows an exemplary internal configuration of a terminal device in accordance with some aspects;
FIG. **193** shows an exemplary internal configuration of a network access node in accordance with some aspects;
FIG. **194** shows an exemplary network scenario involving roadside network access nodes and vehicles or vehicular terminal devices in accordance with some aspects;
FIG. **195** shows an exemplary illustration of a MapReduce framework in accordance with some aspects;

FIG. **196** shows an exemplary illustration of a coded MapReduce framework in accordance with some aspects;
FIG. **197** shows an exemplary network scenario involving groups of vehicles or vehicular terminal devices in accordance with some aspects;
FIG. **198** shows an exemplary internal configuration of a vehicular terminal device in accordance with some aspects;
FIG. **199** shows a first exemplary method of wireless distributed computation in accordance with some aspects;
FIG. **200** shows a second exemplary method of wireless distributed computation in accordance with some aspects;
FIG. **201** shows a progressive network scenario for a terminal device to connect to a network in accordance with some aspects;
FIG. **202** shows an exemplary logical, transport, and physical channel mapping scheme in accordance with some aspects;
FIG. **203** shows an exemplary method for connecting to a network using a direct link in accordance with some aspects;
FIG. **204** shows an exemplary internal configuration for a terminal device in accordance with some aspects;
FIG. **205** shows an exemplary method for telemetry aid over a direct link in accordance with some aspects;
FIG. **206** shows a first exemplary network scenario in accordance with some aspects;
FIG. **207** shows a second exemplary network scenario in accordance with some aspects;
FIG. **208** shows a first exemplary time chart illustrating a procedure for direct link sharing in accordance with some aspects;
FIG. **209** shows a third exemplary network scenario in accordance with some aspects;
FIG. **210** shows a second exemplary time chart illustrating a procedure for direct link sharing in accordance with some aspects;
FIG. **211** shows an exemplary network scenario related to the use of device knowledge history (DKH) classes in accordance with some aspects;
FIG. **212** shows an exemplary internal configuration of a terminal device in accordance with some aspects;
FIG. **213** shows a first exemplary method of performing radio communications at a terminal device in accordance with some aspects;
FIG. **214** shows a second exemplary method of performing radio communications at a terminal device in accordance with some aspects;
FIG. **215** shows a third exemplary method of performing radio communications at a terminal device in accordance with some aspects;
FIG. **216** shows an exemplary radio communication network in accordance with some aspects;
FIG. **217** shows an exemplary internal configuration of a terminal device in accordance with some aspects;
FIG. **218** shows an exemplary internal configuration of a network access node in accordance with some aspects;
FIG. **219** shows an exemplary end-to-end network architecture in accordance with some aspects;
FIG. **220** shows a first exemplary network scenario in accordance with some aspects;
FIG. **221** shows a second exemplary network scenario in accordance with some aspects;
FIG. **222** shows an exemplary internal configuration of a vehicular terminal device in accordance with some aspects;
FIG. **223** shows an exemplary internal configuration of a network access node in accordance with some aspects;
FIG. **224** shows an exemplary message sequence chart detailing the use of sidelink channels for vehicular communication links in accordance with some aspects;
FIG. **225** shows an exemplary method of performing radio communications at a vehicular terminal device in accordance with some aspects;
FIG. **226** shows an exemplary method of organizing vehicle-to-infrastructure (V2I) or vehicle-to-network (V2N) communications for a network access node in accordance with some aspects;
FIG. **227** shows an exemplary method of terminal device management of device-to-device communication in accordance with some aspects;
FIG. **228** shows an exemplary method of network management of device-to-device communication in accordance with some aspects;
FIG. **229** shows an exemplary network scenario related to serving a floating cell with a directional antenna beam in accordance with some aspects;
FIG. **230** shows an exemplary internal configuration of a network access node in accordance with some aspects;
FIG. **231** shows an exemplary internal configuration of an anchor aerial device in accordance with some aspects;
FIG. **232** shows an exemplary internal configuration of a secondary aerial device in accordance with some aspects;
FIG. **233** shows an exemplary time-frequency radio resource allocation in accordance with some aspects;
FIG. **234** shows an exemplary method for controlling a floating cell at an anchor aerial device of the floating cell in accordance with some aspects;
FIG. **235** shows an exemplary method of operating a secondary aerial device in a floating cell including a plurality of vehicles or aerial terminal devices in accordance with some aspects;
FIG. **236** shows an exemplary method of operating a network access node in accordance with some aspects;

FIG. **237** shows an exemplary method for network management of a floating cell in accordance with some aspects;
FIG. **238** shows an exemplary method of anchor drone operation within a floating cell in accordance with some aspects;
FIG. **239** shows an exemplary method of operating a secondary drone within a floating cell in accordance with some aspects;
FIG. **240** shows an exemplary network scenario that illustrates deployment of a mobile infrastructure node in accordance with some aspects;
FIG. **241** shows an exemplary internal configuration of a mobile infrastructure node with an autonomous driving system in accordance with some aspects;
FIG. **242** shows an exemplary method of activating a mobile infrastructure node as a dynamic mobile infrastructure in accordance with some aspects;
FIG. **243** shows an exemplar method of operating a mobile infrastructure node in accordance with some aspects;
FIG. **244** shows an exemplary method of operating a vehicle as a mobile infrastructure node in accordance with some aspects;
FIG. **245** shows an exemplary network scenario involving deployment of a mobile infrastructure node in response to a critical network scenario in accordance with some aspects;
FIG. **246** shows an exemplary configuration of a processing module of a mobile infrastructure node in accordance with some aspects;
FIG. **247** shows an exemplary message sequence chart illustrating activation and operation of a mobile infrastructure node in accordance with some aspects;
FIG. **248** shows an exemplary network scenario involving deployment of multiple mobile infrastructure nodes in accordance with some aspects;
FIG. **249** shows an exemplary internal configuration of a mobile infrastructure node with an autonomous driving system in accordance with some aspects;
FIG. **250** shows an exemplary method of providing network connectivity to an area impacted by network overload or outage at a mobile infrastructure node in accordance with some aspects;
FIG. **251** shows an exemplary method of coordinating one or more mobile infrastructure nodes to respond to network connectivity disruptions in accordance with some aspects;
FIG. **252** shows an exemplary network scenario involving a cluster of terminal devices that utilize the same identity in accordance with some aspects;
FIG. **253** shows an exemplary internal configuration of a terminal device in accordance with some aspects;
FIG. **254** shows an exemplary network scenario illustrating downlink communications in accordance with some aspects;
FIG. **255** shows an exemplary network scenario illustrating uplink communications in accordance with some aspects;
FIG. **256** shows an exemplary method for terminal device communication in accordance with some aspects;
FIG. **257** shows an exemplary method for managing a leader terminal device in accordance with some aspects;
FIG. **258** shows an exemplary method for terminal device communication in accordance with some aspects;
FIG. **259** shows a first exemplary method of performing radio communications at a terminal device in accordance with some aspects;
FIG. **260** shows a second exemplary method of performing radio communications at a terminal device in accordance with some aspects;
FIG. **261** shows an exemplary network scenario in accordance with some aspects;
FIG. **262** shows an exemplary time-frequency radio resource allocation related to a contention-based access mode in accordance with some aspects;
FIG. **263** shows an exemplary time-frequency radio resource allocation related to a scheduled-based access mode in accordance with some aspects;
FIG. **264** shows an exemplary group resource block in accordance with some aspects;
FIG. **265** shows an exemplary network scenario involving group resource block configuration forwarding in accordance with some aspects;
FIG. **266** shows an exemplary network scenario involving operation of a group leader in an out of coverage situation in accordance with some aspects;
FIG. **267** shows an exemplary method for provisioning radio network resources according to application requirements in accordance with some aspects;
FIG. **268** shows an exemplary method for provisioning radio network resources according to application requirements in accordance with some aspects;
FIG. **269** shows an exemplary network scenario involving a mobile cloud network in accordance with some aspects;
FIG. **270** shows an exemplary message sequence chart for setting up a temporary hierarchical network by a network access node in accordance with some aspects;

FIG. **271** shows an exemplary method for communication within a hierarchical network in accordance with some aspects;

FIG. **272** shows an exemplary method for communication in a hierarchical network in accordance with some aspects;

FIG. **273** shows an exemplary network scenario involving a mobile cloud network in accordance with some aspects;

FIG. **274** shows an exemplary message sequence chart for dynamically changing a hierarchical network by a network access node in accordance with some aspects;

FIGs. **275** and **276** show exemplary network scenarios that illustrate the effect of a hierarchical change on a mobile cloud network in accordance with some aspects;

FIG. **277** shows an exemplary method for dynamic communication within a hierarchical network in accordance with some aspects; and

FIG. **278** shows an exemplary method for dynamic communication over a radio access network in accordance with some aspects.

## Detailed Description

The following detailed description refers to the accompanying drawings that show, by way of illustration, specific details and aspects in which the aspects of this disclosure may be practiced.

The word "exemplary" is used herein to mean "serving as an example, instance, or illustration". Any aspect or design described herein as "exemplary" is not necessarily to be construed as preferred or advantageous over other aspects or designs.

The words "plurality" and "multiple" in the description and the claims expressly refer to a quantity greater than one. The terms "group (of)", "set [of]", "collection (of)", "series (of)", "sequence (of)", "grouping (of)", etc., and the like in the description and in the claims, if any, refer to a quantity equal to or greater than one-for example, one or more. Any term expressed in plural form that does not expressly state "plurality" or "multiple" refers to a quantity equal to or greater than one. The terms "proper subset", "reduced subset", and "lesser subset" refer to a subset of a set that is not equal to the set-for example, a subset of a set that contains fewer elements than the set.

As used herein, the term "software" refers to any type of executable instruction or set of instructions., including embedded data in the software. Software can also encompass firmware. Software can create, delete or modify software, e.g., through a machine learning process.

A "module" as used herein is understood as any kind of functionality-implementing entity, which may include hardware-defined modules such as special-purpose hardware, software-defined modules such as a processor executing software or firmware, and mixed modules that include both hardware-defined and software-defined components. A module may thus be an analog circuit or component, digital circuit, mixed-signal circuit or component, logic circuit, processor, microprocessor, Central Processing Unit (CPU), application processor, Graphics Processing Unit (GPU), Digital Signal Processor (DSP), Field Programmable Gate Array (FPGA), integrated circuit, discrete circuit, Application Specific Integrated Circuit (ASIC), etc., or any combination thereof. Any other kind of implementation of the respective functions which will be described below in further detail may also be understood as a "module". It is understood that any two (or more) of the modules detailed herein may be realized as a single module with substantially equivalent functionality, and conversely that any single module detailed herein may be realized as two (or more) separate modules with substantially equivalent functionality. Additionally, references to a "module" may refer to two or more modules that collectively form a single module.

As used herein, the terms "circuit" and "circuitry" can include software-defined circuitry, hardware-defined circuitry, and mixed hardware-defined and software-defined circuitry.

As used herein, "memory" may be understood as a non-transitory computer-readable medium in which data or information can be stored for retrieval. Memory may be used by, included in, integrated or associated with a module. References to "memory" included herein may thus be understood as referring to volatile or non-volatile memory, including random access memory (RAM), read-only memory (ROM), flash memory, magnetoresistive random access memory (MRAM), phase random access memory (PRAM), spin transfer torque random access memory (STT MRAM), solid-state storage, 3-dimensional memory, 3-dimensional crosspoint memory, NAND memory, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be implemented as more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

Various aspects described herein can utilize any radio communication technology, including but not limited to a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, etc. These aspects can be applied in the context of any spectrum management scheme including dedicated licensed spectrum, unlicensed spectrum, (licensed) shared spectrum (such as Licensed Shared Access (LSA) in 2.3-2.4 GHz, 3.4-3.6 GHz,3.6-3.8 GHz and further frequencies and Spectrum Access System (SAS) in 3.55-3.7 GHz and further frequencies). Applicable spectrum bands can also include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc.), Intelligent Transport Systems (ITS) band spectrum (5.9 GHz, typically 5.85-5.925 GHz), and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications., etc. Additionally, a hierarchical application of the scheme is possible, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. Various aspects can also be applied to different OFDM flavors (Cyclic Prefix OFDM (CP-OFDM), Single Carrier FDMA (SC-FDMA), Single Carrier OFDM (SC-OFDM), filter bank-based multicarrier (FBMC), OFDMA, etc.) and in particular 3GPP NR (New Radio) by allocating the OFDM carrier data bit vectors to the corresponding symbol resources. These aspects can also be applied to any of a Vehicle-to-Vehicle (V2V) context, a Vehicle-to-Infrastructure (V2I) context, an Infrastructure-to-Vehicle (I2V) context, or a Vehicle-to-Everything (V2X) context, e.g., in a DSRC or LTE V2X context, etc.

The term "base station" used in reference to an access node of a mobile communication network may be understood as a macro base station (such as, for example, for cellular communications), micro/pico/femto base station, Node B, evolved NodeB (eNB), Home eNodeB, Remote Radio Head (RRH), relay point, access point (AP, such as, for example, for Wi-Fi, WLAN, WiGig, millimeter Wave (mmWave), etc.) etc. As used herein, a "cell" in the setting of telecommunications may be understood as an area (e.g., a public place) or space (e.g., multi-story building or airspace) served by a base station or access point. The base station may be mobile, e.g., installed in a vehicle, and the covered area or space may move accordingly. Accordingly, a cell may be covered by a set of co-located transmit and receive antennas, each of which also able to cover and serve a specific sector of the cell. A base station or access point may serve one or more cells, where each cell is characterized by a distinct communication channel or standard (e.g., a base station offering 2G, 3G and LTE services). Macro-, micro-, femto-, pico-cells may have different cell sizes and ranges, and may be static or dynamic (e.g., a cell installed in a drone or balloon) or change its characteristic dynamically (for example, from macrocell to picocell, from static deployment to dynamic deployment, from omnidirectional to directional, from broadcast to narrowcast). Communication channels may be narrowband or broadband. Communication channels may also use carrier aggregation across radio communication technologies and standards, or flexibly adapt bandwidth to communication needs. In addition, terminal devices can include or act as base stations or access points or relays or other network access nodes.

For purposes of this disclosure, radio communication technologies or standards may be classified as one of a Short Range radio communication technology or Cellular Wide Area radio communication technology. Further, radio communication technologies or standards may be classified as person to person, person to machine, machine to person, machine to machine, device to device, point-to-point, one-to-many, broadcast, peer-to-peer, full-duplex, half-duplex, omnidirectional, beamformed, beam-formed, and/or directional. Further, radio communication technologies or standards may be classified as using electromagnetic or light waves or a combination thereof.

Short Range radio communication technologies include, for example, Bluetooth, WLAN (e.g., according to any IEEE 802.11 standard), WiGig (e.g., according to any IEEE 802.11 standard), millimeter Wave and other similar radio communication technologies.

Cellular Wide Area radio communication technologies include, for example, Global System for Mobile Communications (GSM), Code Division Multiple Access 2000 (CDMA2000), Universal Mobile Telecommunications System (UMTS), Long Term Evolution (LTE), Long Term Evolution Advanced (LTE-A), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax), 5G (e.g., millimeter Wave (mmWave), 3GPP New Radio (NR)), next generation cellular standards like 6G, and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. Furthermore, as used herein the term GSM refers to both circuit- and packet-switched GSM, for example, including GPRS, EDGE, and any other related GSM technologies. Likewise, the term UMTS refers to both circuit- and packet-switched GSM, for example, including HSPA, HSDPA/HSUPA, HSDPA+/HSUPA+, and any other related UMTS technologies. Further communication technologies include Line of sight (LiFi) communication technology. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, for example, in reference to a communication network such as a mobile communication network, encompasses both an access section of a network (e.g., a radio access network (RAN) section) and a core section of a network (e.g., a core network section), but also, for an end-to-end system, encompasses mobile (including peer-to-peer, device to device, and/or machine to machine communications), access, backhaul, server, backbone and gateway/interchange elements to other networks of the same or different type. The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network. The uplink communication channel may be a physical channel or a virtual channel. Idle or connection mode can be connection-switched or packet-switched.

The term "terminal devices" includes, for example, mobile phones, tablets, laptops, computers, Internet of Things (IoT) devices, wearables, implantable devices, machine-type communication devices, etc., and vehicles e.g., cars, trucks, buses, bicycles, robots, motorbikes, trains, ships, submarines, drones, airplanes, balloons, satellites, spacecraft, etc.).laptops, ), wearables trucks, buses, bicycles, robots, motorbikes, trains, ships, submarines, , balloons, satellites, spacecraft. Vehicles can be autonomously controlled, semi-autonomously controlled, or under control of a person, e.g., according to one of the SAE J3016 levels of driving automation. The level of driving automation may be selected based on past, current and estimated future conditions of the vehicle, other vehicles, traffic, persons, or the environment.

Unless explicitly specified, the term "transmit" encompasses both direct (point-to-point) and indirect transmission (via one or more intermediary points), from terminal devices to network access or relay nodes, from terminal devices to terminal devices, from network access or relay nodes to backbone. Similarly, the term "receive" encompasses both direct and indirect reception and between terminal devices, network access and relay nodes and backbone. The term "communicate" encompasses one or both of transmitting and receiving, for example, unidirectional or bidirectional communication in one or both of the incoming and outgoing directions. Additionally, the terms "transmit", "receive", "communicate", and other similar terms encompass both physical transmission (e.g., the transmission of radio signals) and logical transmission (e.g., the transmission of logical data over a software-level connection). For example, a processor may transmit or receive data in the form of radio signals with another processor, where the physical transmission and reception is handled by radio-layer components such as RF transceivers and antennas and the logical transmission and reception is performed by the processor. The term "calculate" encompasses both direct calculations via a mathematical expression/formula/relationship and indirect calculations via lookup or hash tables and other indexing or searching operations.

FIG. **1** shows an exemplary depiction of communication network **100** according to some aspects. As shown in FIG. **1,** communication network **100** may be an end-to-end network spanning from radio access network **102** to backbone networks **132** and **142.** Backbone networks **132** and **142** may be realized as predominantly wireline networks. Network access nodes **120-126** may a radio access network and may wirelessly transmit and receive data with terminal devices **104-116** to provide radio access connections to terminal devices **104-116.** Terminal devices **104-116** may utilize the radio access connections provided by radio access network **102** to exchange data on end-to-end connections with servers in backbone networks **132** and **142.** The radio access connections between terminal devices **104-116** and network access nodes **120-126** may be implemented according to one or more radio access technologies, where each terminal device may transmit and receive data with a corresponding network access node according to the protocols of a particular radio access technology that governs the radio access connection. In some aspects, one or more of terminal devices **104-116** may utilize licensed spectrum or unlicensed spectrum for the radio access connections. In some aspects, one or more of terminal devices **104-116** may directly communicate with one another according to any of a variety of different device-to-device (D2D) communication protocols.

As shown in FIG. **1,** in some aspects terminal devices such as terminal devices **106-110** may rely on a forwarding link provided by terminal device **104,** where terminal device **104** may act as a gateway or relay between terminal devices **106-110** and network access node **120.** In some aspects, terminal devices **106-110** may be configured according to a mesh or multi-hop network and may communicate with terminal device **104** via one or more other terminal devices. The configuration of terminal devices, e.g., a mesh or multi-hop configuration, may change dynamically e.g., according to terminal or user requirements, the current radio or network environment, the availability or performance of applications and services, or the cost of communications or access.

In some aspects, terminal devices such as terminal device **116** may utilize relay node **118** to transmit and/or receive data with network access node **126,** where relay node **118** may perform relay transmission between terminal devices **116** and network access node **126,** e.g., with a simple repeating scheme or a more complex processing and forwarding scheme. The relay may also be a realized as a series of relays, or use opportunistic relaying, where a the best or approximately best relay or series of relays at a given moment in time or time interval is used.

In some aspects, network access nodes such as network access node **124** and **126** may interface with core network **130,** which may provide routing, control, and management functions that govern both radio access connections and core network and backhaul connections. As shown in FIG. **1,** core network **130** may interface with backbone network **142,** and may perform network gateway functions to manage the transfer of data between network access nodes **124** and **126** and the various servers of backbone network **142.** In some aspects, network access nodes **124** and **126** may be directly connected with each other via a direct interface, which may be wired or wireless. In some aspects, network access nodes such as network access nodes **120** may interface directly with backbone network **132**. In some aspects, network access nodes such as network access node **122** may interface with backbone network **132** via router **128.**

Backbone networks **132** and **142** may contain various different internet and external servers in servers **134-138** and **144-148.** Terminal devices **104-116** may transmit and receive data with servers **134-138** and **144-148** on logical software-level connections that rely on the radio access network and other intermediate interfaces for lower layer transport. Terminal devices **104-116** may therefore utilize communication network **100** as an end-to-end network to transmit and receive data, which may include internet and application data in addition to other types of user-plane data. In some aspects backbone networks **132** and **142** may interface via gateways **140** and **150,** which may be connected at interchange **152.**

## 1 Common Channel

Reception or transmission of discovery and control information may be an important part of wireless network activity for terminal devices or network access nodes. Terminal devices may reduce operating power and increase operating time and performance by intelligently finding or scanning the radio environment for network access nodes and standards or other terminal devices. Terminal devices can scan for discovery information in order to detect and identify available communication technologies and standards, parameters of these available communication technologies and standards, and proximate network access nodes or other terminal devices. In another aspect, there may be a known or from time to time published schedule, specifying one or more access technologies or standards, or specifying one or more channels, which may be scanned with priority to reduce scan efforts. In yet another aspect, discovery or control information may be communicated as payload or as part of the payload of channels, e.g., as a web or internet or cloud service, also using preferred or advertised channels, to reduce scan efforts. After identifying the presence of proximate network access nodes or other terminal devices via reception of such discovery information, terminal devices may be able to establish a wireless connection with a selected network access node or other terminal device in order to exchange data and/or pursue other radio interactions with network access nodes or other terminal devices such as radio measurement or reception of broadcast information. The selection of a network access node or other terminal may be based on terminal or user requirements, past, present and anticipated future radio and environment conditions, the availability or performance of applications and services, or the cost of communications or access.

In order to ensure that both incoming and outgoing data is received and transmitted properly with a selected network access node or other terminal device e.g., according to a wireless standard or a proprietary standard, or a mix thereof, a terminal device may also receive control information that provides control information or parameters. The control parameters can include, for example, time and frequency scheduling information, coding/modulation schemes, power control information, paging information, retransmission information, connection/mobility information, and/or other such information that defines how and when data is to be transmitted and received. Terminal devices may then use the control parameters to control data transmission and reception with the network access node or other terminal device, thus enabling the terminal device to successfully exchange user and other data traffic with the network access node or other terminal device over the wireless connection. The network access node may interface with an underlying communication network (e.g., a core network) that may provide a terminal device with data including voice, multimedia (e.g., audio/video/image), internet and/or other web-browsing data, etc., or provide access to other applications and services, e.g., using cloud technologies.

Therefore, in order to effectively operate on wireless communication networks, it may be important that terminal devices properly receive, transmit and interpret both discovery and control information. To this end, it may be desirable that terminal devices receive the discovery and control information on proper frequency resources at correct times (for example, in accordance with scheduling parameters) and demodulate and decode the received discovery and control information according to the modulation and coding schemes (for example, in accordance with formatting parameters) to recover the original data or keep the effort of finding the discovery and control information low.

The procedure to receive and interpret such information according to the corresponding scheduling and formatting parameters may be defined by specific protocols associated with the radio access technology employed by the wireless communications network. For example, a first wireless network may utilize a first radio access technology (RAT, such as, for example, a 3GPP radio access technology, Wi-Fi, and Bluetooth), which may have a specific wireless access protocol that defines the scheduling and format for discovery information, control information, and user traffic data transmission and reception. Network access nodes and terminal devices operating on the first wireless network may thus follow the wireless protocols of the first radio access technology in order to properly transmit and receive wireless data on the first wireless network.

Each radio access technology may define different scheduling and format parameters for discovery and control information. For example, a second radio access technology may specify different scheduling and format parameters for discovery and control information (in addition to for user data traffic) from the first radio access technology. Accordingly, a terminal device may utilize a different reception procedure to receive discovery and control information for the first wireless network than for the second wireless network; examples include receiving different discovery signals/waveforms, receiving discovery and control information with different timing, receiving discovery and control information in different formats, receiving discovery and control information on different channels and/or using different frequency resources, etc.

The present disclosure relates to a terminal device that is configured to operate on a plurality of radio access technologies. A terminal device configured to operate on a plurality of radio access technologies (e.g., the first and second RATs) can be configured in accordance with the wireless protocols of both the first and second RATs (and likewise for operation on additional RATs). For example, LTE network access nodes (e.g., eNodeBs) may transmit discovery and control information in a different format (including the type/contents of information, modulation and coding scheme, data rates, etc.) with different time and frequency scheduling (including periodicity, center frequency, bandwidth, duration, etc.) than Wi-Fi network access nodes (e.g., WLAN APs). Consequently, a terminal device designed for both LTE and Wi-Fi operation may operate according to the specific LTE protocols in order to properly receive LTE discovery and control information and may also operate according to the specific Wi-Fi protocols in order to properly receive Wi-Fi discovery and control information. Terminal devices configured to operate on further radio access networks, such as UMTS, GSM, Bluetooth, may likewise be configured to transmit and receive radio signals according to the corresponding individual access protocols. In some aspects, terminal devices may have dedicated hardware and/or software component for each supported radio access technology.

In some aspects, a terminal device can be configured to omit the periodic scanning of the radio environment for available network access nodes, other terminal devices, and communication technologies and standards. This allows the terminal device to reduce operating power consumption and increase operating time and performance by omitting the periodic scanning of the radio environment for available network access nodes, other terminal devices, and communication technologies and standards. Instead, of performing periodic comprehensive scans of the radio environment, a terminal device can be configured scan dedicated discovery or control channels. In some aspects, dedicated discovery or control channels may be provided by network access nodes or other terminal devices. In other aspects, network access nodes or other terminal devices may advertise which discovery or control channels should be used by the terminal device.

Alternatively or additionally, in some aspects, network access nodes or other terminal devices can act as a proxy, relaying discovery or control information on a dedicated channel. For example, a resourceful other terminal device relaying discovery or control information via low power short range communication, such as Bluetooth or 802.15.4 Low Energy (LE), to a proximate terminal device.

FIG. **2** shows an exemplary wireless network configuration in accordance with some aspects. As shown in FIG. **2,** terminal devices **200** and **202** may interact with one or more network access nodes, including network access nodes **210-230.** In some aspects, network access nodes **210** and **212** may be network access nodes for a first radio access technology (RAT) and network access nodes **214-230** may be network access nodes for a second RAT. Furthermore, in some aspects network access nodes **210** and **212** may be located at a cell site or radio tower (or a similar network broadcast point) that contain cells of additional radio access technologies. For example, one or more cells of a third RAT, a fourth RAT, and/or a fifth RAT may be located at a cell site with network access node **210** and/or **212.** In an exemplary scenario, network access node **210** may be an LTE network access node and may be co-located with any one or more of UMTS, GSM, mmWave, 5G, Wi-Fi/WLAN, and/or Bluetooth. Although aspects detailed below may refer radio access networks, aspects provided below can use any other combinations of radio access networks, and network access nodes **210-212** and **214-230** may analogously utilize any type of radio access technology in compliance with the radio access networks. For example, aspects provided below can use LTE-Advanced and Wi-Fi/WLAN.

Terminal device **200** and terminal device **202** may be any type of terminal device such as a cellular phone, user equipment, tablet, laptop, personal computer, wearable, multimedia playback and/or other handheld electronic device, consumer/home/office/commercial appliance, vehicle, or any type of electronic devices capable of wireless communications.

In some aspects, terminal devices **200** and **202** may be configured to operate in accordance with a plurality of radio access networks, such as both LTE and Wi-Fi access networks. Consequently, terminal devices **200** and **202** may include hardware and/or software specifically configured to transmit and receive wireless signals according to each respective access protocol. Without loss of generality, terminal devices **200** (and/or **202**) may also be configured to support other radio access technologies, such as other cellular, short-range, and/or metropolitan area radio access technologies including. For example, in an exemplary configuration terminal device **200** may be configured to support LTE, UMTS (both circuit- and packet-switched), GSM (both circuit- and packet-switched), and Wi-Fi. In another exemplary configuration, terminal device **200** may additionally or alternatively be configured to support 5G and mmWave radio access technologies.

FIG. 3 shows an exemplary internal configuration of terminal device **200** in accordance with some aspects. As shown in FIG. **3,** terminal device **200** may include antenna system **302,** communication system **304** including communication modules **306a-306e** and controller **308,** data source **310,** memory **312,** and data sink **314.** Although not explicitly shown in FIG. 3, terminal device **200** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output devices (display(s), keypad(s), touchscreen(s), speaker(s), external button(s), camera(s), microphone(s), etc.), etc.

In an abridged operational overview, terminal device **200** may transmit and receive radio signals on one or more radio access networks. Controller **308** may direct such communication functionality of terminal device **200** according to the radio access protocols associated with each radio access network and may execute control over antenna system **302** in order to transmit and receive radio signals according to the formatting and scheduling parameters defined by each access protocol.

Terminal device **200** may transmit and receive radio signals with antenna system **302,** which may be an antenna array including multiple antennas and may additionally include analog antenna combination and/or beamforming circuitry. The antennas of antenna system **302** may be individually assigned or commonly shared between one or more of communication modules **306a-306e.** For example, one or more of communication modules **306a-306e** may have a unique dedicated antenna while other of communication modules **306a-306e** may share a common antenna.

Controller **308** may maintain RAT connections via communication modules **306a-306d** by providing and receiving upper-layer uplink and downlink data in addition to controlling the transmission and reception of such data via communication modules **306a-306d** as radio signals. Communication modules **306a-306d** may transmit and receive radio signals via antenna system **302** according to their respective radio access technology and may be responsible for the corresponding RF- and PHY-level processing. In some aspects, first communication module **306a** may be assigned to a first RAT, second communication module **306b** may be assigned to a second RAT, third communication module **306c** may be assigned to a second RAT, and fourth communication module **306d** may be assigned to a fourth RAT. As further detailed below, common discovery module **306e** may be configured to perform common discovery channel monitoring and processing.

In the receive path, communication modules **306a-306d** may receive analog radio frequency signals from antenna system **302** and perform analog and digital RF front-end processing on the analog radio frequency signals to produce digital baseband samples (e.g., In-Phase/Quadrature (IQ) samples). Communication modules **306a-306d** may accordingly include analog and/or digital reception components including amplifiers (e.g., a Low Noise Amplifier (LNA)), filters, RF demodulators (e.g., an RF IQ demodulator), and analog-to-digital converters (ADCs) to convert the received radio frequency signals to digital baseband samples. Following the RF demodulation, communication modules **306a-306d** may perform PHY layer reception processing on the digital baseband samples including one or more of error detection, forward error correction decoding, channel decoding and de-interleaving, physical channel demodulation, physical channel de-mapping, radio measurement and search, frequency and time synchronization, antenna diversity processing, rate matching, retransmission processing. In some aspects, communication modules **306a-306d** can include hardware accelerators that can be assigned such processing-intensive tasks. Communication modules **306a-306d** may also provide the resulting digital data streams to controller **308** for further processing according to the associate radio access protocols.

Although shown as single components in FIG. 3, communication modules **306a-306d** may each be realized as separate RF and PHY modules including the respective RF and PHY components and functionality. Furthermore, one or more of such RF and PHY modules of multiple of communication modules **306a-306d** may be integrated into a common component, such as, for example, a common RF front-end module that is shared between multiple radio access technologies. Such variations are thus recognized as offering similar functionality and are within the scope of this disclosure.

In the transmit path, communication modules **306a-306d** may receive digital data streams from controller **308** and perform PHY layer transmit processing including one or more of error detection, forward error correction encoding, channel coding and interleaving, physical channel modulation, physical channel mapping, antenna diversity processing, rate matching, power control and weighting, and/or retransmission processing to produce digital baseband samples. Communication modules **306a-306d** may then perform analog and digital RF front-end processing on the digital baseband samples to produce analog radio frequency signals to provide to antenna system **302** for wireless transmission. Communication modules **306a-306d** may thus also include analog and/or digital transmission components including amplifiers (e.g., a Power Amplifier (PA), filters, RF modulators (e.g., an RF IQ modulator), and digital-to-analog converters (DACs) to mix the digital baseband samples to produce the analog radio frequency signals for wireless transmission by antenna system **302.**

In some aspects, one or more of communication modules **306a-306d** may be structurally realized as hardware-defined modules, for example, as one or more dedicated hardware circuits or FPGAs. In some aspects, one or more of communication modules **306a-306d** may be structurally realized as software-defined modules, for example, as one or more processors executing program code defining arithmetic, control, and I/O instructions (e.g., software and/or firmware) stored in a non-transitory computer-readable storage medium. In some aspects, one or more of communication modules **306a-306d** may be structurally realized as a combination of hardware-defined modules and software-defined modules.

Although not explicitly shown in FIG. 3, communication modules **306a-306d** may include a controller, such as a processor, configured to control the various hardware and/or software processing components of communication modules **306a-306d** in accordance with physical layer control logic defined by the communications protocol for the relevant radio access technologies.

While communication modules **306a-306d** may be responsible for RF and PHY processing according to the respective radio access protocols, controller **308** may be responsible for upper-layer control and may be embodied as a processor configured to execute protocol stack software code that directs controller **308** to operate according to the associated radio access protocol logic. Controller **308** may direct upper-layer control over communication modules **306a-306d** in addition to providing uplink data for transmission and receiving downlink data for further processing.

Although depicted as a single component in FIG. **3,** controller **308** may be realized as multiple separate controllers each tasked with execution of protocol stack logic for one or more communication modules **306a-306d,** such as, for example, a dedicated controller for each of communication modules **306a-306d.** Controller **308** may be responsible for controlling antenna system **302** and communication modules **306a-306d** in accordance with the communication protocols of supported radio access technology, and accordingly may represent the Access Stratum and Non-Access Stratum (NAS) (also encompassing Layer 2 and Layer 3) of supported radio access technology.

As shown in FIG. **3,** terminal device **200** may also include data source **310,** memory **312,** and data sink **314,** where data source **310** may include sources of communication data above controller **308** (e.g., above the NAS/Layer 3) and data sink **314** may include destinations of communication data above controller **308** (e.g., above the NAS/Layer 3). Such may include, for example, an application processor of terminal device **200,** which may be configured to execute various applications and/or programs of terminal device **200** at an application layer of terminal device **200,** such as, for example, an Operating System (OS), a User Interface (UI) for supporting user interaction with terminal device **200,** and/or various user applications. The application processor may interface with controller **308** (as data source **310**/data sink **314**) as an application layer to transmit and receive user data, such as voice data, audio/video/image data, messaging data, application data, and basic Internet/web access data, over the radio network connection(s) provided by communication system **304.** Data source **310** and data sink **314** may additionally represent various user input/output devices of terminal device **200,** such as display(s), keypad(s), touchscreen(s), speaker(s), external button(s), camera(s), and microphone(s), which may allow a user of terminal device **200** to control various communication functions of terminal device **200** associated with user data. Memory **312** includes a memory component of terminal device **200,** such as, for example, a hard drive or another such memory device. Although not explicitly depicted in FIG. 3, various other components of terminal device **200** shown in FIG. 3 may include integrated permanent and non-permanent memory components. These components can be used, for example, for storing software program code and/or buffering data.

1.1 Common Channel #1

In an exemplary network scenario such as depicted in FIG. **2,** terminal device **200** may identify proximate wireless networks (e.g., one or more of network access nodes **210-230)** by scanning for discovery signals broadcasted by network access nodes. In many conventional communication scenarios, each network access node may broadcast its corresponding discovery signal on a specific discovery channel (e.g., a radio frequency channel, which may be a single- or multi-carrier frequency channel depending on the corresponding radio access technology) according to RAT-specific scheduling and formatting parameters. For example, each radio access technology may define a specific discovery signal (e.g., with a specific coding and modulation format) that is broadcast on specific time-frequency resources (e.g., a specific carriers or subcarriers at specific time periods). For example, network access nodes **210** and **212** may broadcast discovery signals of the first RAT on one or more discovery channels for the first RAT (which may or may not be the same physical frequency channel, e.g., different cells of the first RAT may utilize different discovery channels) while network access nodes **214-230** may broadcast discovery signals of the second RAT on one or more discovery channels for the second RAT (which may or may not be the same physical frequency channel).

Depending on the specific RAT protocols, a RAT-specific discovery channel may overlap with the RAT-specific operating channel. For example, in an exemplary Wi-Fi setting, a Wi-Fi network access node may broadcast Wi-Fi discovery signals such as beacons on the Wi-Fi operating channel. Accordingly, the Wi-Fi operating channel may also function as the discovery channel, which terminal devices may monitor to detect beacons (Wi-Fi discovery signals) to detect Wi-Fi network access nodes. In an exemplary LTE setting, an LTE network access node may broadcast LTE discovery signals such as Primary Synchronization Sequences (PSSs) and Secondary Synchronization Sequences (SSSs) on a set of central subcarriers of the LTE operating channel (and may broadcast other LTE discovery signals such as Master Information Blocks (MIBs) and System Information Blocks (SIBs) on generally any subcarrier of the LTE operating channel). In other RATs, the discovery channel may be allocated separately from the operating channel. This disclosure covers all such cases, and accordingly RAT-specific discovery channels may be the same as the RAT-specific operating channel in frequency, may overlap with the RAT-specific operating channel in frequency, and/or may be allocated separately from the RAT-specific operating channel in frequency. Terminal devices may therefore perform discovery for a given RAT by monitoring radio signals on the RAT-specific discovery channel, which may or may not overlap with the RAT-specific operating channel. Furthermore, there may be a predefined set of operating channels for certain RATs (e.g., LTE center frequencies specified by the 3GPP, Wi-Fi operating channels specified by IEEE, etc.). Accordingly, in some aspects where the discovery channel overlaps with the operating channel, a terminal device may scan discovery channels by iterating through the predefined set of different operating channels and performing discovery, such as, for example, by iterating through one or more LTE center frequencies to detect LTE discovery signals or iterating through one or more Wi-Fi operating channels to detect Wi-Fi discovery signals.

In many conventional radio communication scenarios, terminal device **200** may therefore monitor the one or more discovery channels to discover network access nodes of various RATs. For example, in order to discover network access nodes of the first RAT, terminal device **200** may monitor discovery channels of the first RAT for discovery signals (where, as indicated above, the discovery channels may or may not overlap with the operating channel of the first RAT). In some aspects, discovery signals for particular radio access technologies may be defined by a specific standard or protocol, such as a particular signal format and/or a specific transmission schedule. Terminal device **200** may therefore discover cells of the first RAT by scanning for discovery signals on the discovery channels of the first RAT. Terminal device **200** may therefore attempt to discover network access nodes of the first RAT by monitoring radio signals according to the specifics of the first RAT (such as the signal format and scheduling of the discovery signal, discovery channel frequencies, etc., which may be standardized or defined in a protocol for the first RAT). In doing so, terminal device **200** may receive and identify discovery signals that are broadcasted by network access nodes **210** and **212** and subsequently identify, or 'discover', network access nodes **210** and **212.** Likewise, terminal device **200** may attempt to discover network access nodes of the second RAT by monitoring radio signals according to the specifics of the second RAT (such as the signal format and scheduling of the discovery signal, discovery channel frequencies, etc., which may be standardized or defined in a protocol for the first RAT). Terminal device **200** may therefore similarly discover network access nodes **214-230.** As noted above, in some aspects network access nodes **210** and **212** may additionally provide carriers for a third RAT and/or a fourth RAT, which terminal device **200** may also discover by monitoring radio signals according to the third and fourth RATs, respectively.

As introduced above, communication modules **306a-306d** may be responsible for RF- and PHY-level signal processing of the respective radio access technology. Accordingly, controller **308** may maintain a different radio access connection via one or more of communication modules **306a-306d** by utilizing communication modules **306a-306d** to transmit and receive data. Controller **308** may maintain certain radio access connections independently from one another and may maintain other radio access connections in cooperation with other radio access connections.

For example, in some aspects controller **308** may maintain radio access connections for first communication module **306a** (a first RAT connection), second communication module **306b** (a second RAT connection), third communication module **306c** (a third RAT connection), and fourth communication module **306d** (a fourth RAT connection) in conjunction with one another, such as in accordance with a master/slave-RAT system. Conversely, in some aspects controller **308** may maintain the fourth RAT connection for fourth communication module **306d** substantially separate from the cellular RAT connections of first communication module **306a,** second communication module **306b,** and third communication module **306c,** e.g., not as part of the same master/slave RAT system.

Controller **308** may handle the RAT connections of each of communication modules **306a-306d** according to the corresponding radio access protocols, which may include the triggering of discovery procedures. Controller **308** may trigger discovery procedures separately at each of communication modules **306a-306d,** the specific timing of which may depend on the particular radio access technologies and the current status of the RAT connection. Accordingly, at any given time, there may be some, none, or all of communication modules **306a-306d** that perform discovery.

For example, during an initial power-on operation of terminal device **200,** controller **308** may trigger discovery for communication modules **306a-306d** as each RAT connection may be attempting to connect to a suitable network access node. In some aspects, controller **308** may manage the RAT connection s according to a prioritized hierarchy, such as where controller **308** may prioritize the first RAT over the second and third RATs. For example, controller **308** may operate the first, second, and third RATs in a master/slave RAT system, where one RAT is primarily active (e.g., the master RAT) and the other RATs (e.g., slave RATs) are idle. Controller **308** may therefore attempt to maintain the first RAT in the master RAT and may fall back to the second or third RAT when there are no viable cells of the first RAT available. Accordingly, in some aspects controller **308** may trigger discovery for communication module **306a** following initial power-on and, if no cells of the first RAT are found, proceed to trigger discovery for the second or third RAT. In an exemplary scenario, the first RAT may be e.g., LTE and the second and third RATs may be 'legacy' RATs such as UMTS or GSM.

After RAT connections are established, controller **308** may periodically trigger discovery at one or more of communication modules **306a-306d** based on the current radio access status of the respective RAT connections. For example, controller **308** may establish a first RAT connection with a cell of the first RAT via first communication module **306a** that was discovered during initial discovery. However, if the first RAT connection becomes poor (e.g., weak signal strength or low signal quality, or when the radio link fails and should be reestablished), controller **308** may trigger a fresh discovery procedure at first communication module **306a** in order to detect other proximate cells of the first RAT to measure and potentially switch to (either via handover or reselection) another cell of the first RAT. The controller **308** may also trigger inter-RAT discovery by triggering a new discovery procedure at second communication module **306b** and/or third communication module **306c.** Depending on the individual status of RAT connections of one or more of communication modules **306a-306d,** zero or more of communication modules **306a-306d** may perform discovery procedures at any given time.

As each of communication modules **306a-306d** may be tasked with discovering a different type of radio access network (which may each have a unique discovery signal in terms of both scheduling and format), communication modules **306a-306d** may perform RAT-specific processing on received radio signals in order to properly perform discovery. For example, as each radio access technology may broadcast a unique discovery signal on a unique discovery channel, communication modules **306a-306d** may scan different discovery channels and utilize different discovery signal detection techniques (depending on the respective target discovery signal, e.g., the signal format and/or scheduling) in order to discover proximate network access nodes for each respective radio access technology. For example, first communication module **306a** may capture radio signals on different frequency bands and perform different signal processing for detection of discovery signals of the first RAT than fourth communication module **306d** for detection of discovery signals of the fourth RAT; such may likewise hold for second communication module **306b** and third communication module **306c.**

As discovery procedures may involve the detection of previously unknown network access nodes, time synchronization information of the network access nodes is likely not available during discovery. Accordingly, terminal device **200** may not have specific knowledge of when discovery signals for each radio access technology will be broadcast. For example, in an exemplary setting where the first radio access technology is LTE, when attempting to discover LTE cells, first communication module **306a** may not have any timing reference point that indicates when PSS and SSS sequences and MIBs/SIBs will be broadcast by LTE cells. Communication modules **306a-306d** may face similar scenarios for various different radio access technologies. Consequently, communication modules **306a-306d** may continuously scan the corresponding discovery channels in order to effectively detect discovery signals, depending on which of communication modules **306a-306d** are currently tasked with performing discovery (which may in turn depend on the current status of the ongoing communication connection for each communication module.) Each of communication modules **306a-306d** that perform discovery at a given point in time may therefore be actively powered on and perform active reception processing on their respectively assigned frequency bands in order to discover potential network access nodes.

Communication modules **306a-306d** may perform constant reception and processing or may only perform periodic reception and processing depending on the targeted radio access technology. Regardless, the frequent operation of communication modules **306a-306d** (in addition to the respective antennas of antenna system **302**) may have a considerable power penalty for terminal device **200.** Unfortunately, such power penalty may be unavoidable as communication modules **306a-306d** generally need to operate continuously to discover nearby wireless networks. The power penalty may be particularly aggravated where terminal device **200** is battery-powered due to the heavy battery drain associated with regular operation of communication modules **306a-306d.**

Accordingly, in order to reduce the power penalty associated with monitoring potential nearby wireless networks, terminal device **200** may utilize common discovery module **306e** to perform discovery in place of communication modules **306a-306d.** Common discovery module **306e** may then monitor a common discovery channel to discover proximate wireless networks and network access nodes, regardless of the type of the radio access technology used by the wireless networks. Instead of operating multiple of communication modules **306a-306d** to discover proximate wireless networks for each radio access technology, terminal device **200** may utilize common discovery module **306e** to monitor the common discovery channel to detect discovery signals for proximate wireless networks. In some aspects, the common discovery channel may include discovery signals that contain discovery information for network access nodes of multiple different radio access technologies.

In some aspects, network access nodes may cooperate in order to ensure that the network access nodes are represented on the common discovery channel. As further detailed below, such may involve either a centralized discovery broadcast architecture or a distributed discovery broadcast architecture, both of which may result in broadcast of discovery signals on the common discovery channel that indicate the presence of proximate wireless networks. Accordingly, as the proximate wireless networks are all represented on the common discovery channel, terminal device **200** may utilize the common discovery module to monitor the common discovery channel without needing to constantly operate communication modules **306a-306d.** Such may markedly reduce power consumption at terminal device **200** without sacrificing effective discovery of proximate networks.

Accordingly, controller **308** may utilize communication modules **306a-306d** to maintain separate RAT connections according to their respective RATs. As previously detailed, the RAT connections at communication modules **306a-306d** may call for discovery procedures according to the specific radio access protocols and the current status of each RAT connection. Controller **308** may thus monitor the status of the RAT connections to determine whether discovery should be triggered at any one or more communication modules **306a-306d.**

In some aspects, controller **308** may trigger discovery at any one or more communication modules **306a-306d** during initial power-on procedures, following loss of coverage, and/or upon detection of poor radio measurements (low signal power or poor signal quality). Such discovery triggering criteria may vary according to the specific radio access protocols of each RAT connection.

In some aspects, instead of triggering discovery at communication modules **306a-306d** when necessary, controller **308** may instead trigger discovery at common discovery module **306e**. Common discovery module **306e** may then scan a common discovery channel to detect network access nodes for one or more of the radio access technologies of communication modules **306a-306d**. Terminal device **200** may thus considerably reduce power expenditure as communication modules **306a-306d** may be powered down or enter a sleep state during discovery procedures.

In some aspects, common discovery module **306e** includes only RF-and PHY-reception components (as detailed above regarding communication modules **306a-306d**) related to reception and detection of discovery signals. FIG. **4** shows an exemplary internal configuration of common discovery module **306e** in accordance with some aspects. As shown in FIG. **4**, common discovery module **306e** may include configurable RF module **402** and digital processing module **404.** In some aspects, configurable RF module **402** may include analog and/or digital reception components including amplifiers (e.g., an LNA), filters, an RF demodulator (e.g., an RF IQ demodulator), and an ADC to convert the received radio frequency signals to digital baseband samples. Configurable RF module **402** may be configured to scan different RF channels (e.g., by frequency) and produce baseband samples to provide to digital processing module **404**. Digital processing module **404** may then perform PHY-layer reception processing to process and evaluate the baseband samples. In some aspects, digital processing module **404** may be software-configurable and may include a controller and one or more dedicated hardware circuits, which may each be dedicated to performing a specific processing task as assigned by the controller (e.g., hardware accelerators). Digital processing module **404** may process baseband samples received from configurable RF module **402**, for example as part of discovery. Digital processing module **404** may provide discovery results to controller **308**.

As common discovery module **306e** may only be employed for discovery of radio access technologies, common discovery module **306e** may not maintain a full bidirectional RAT connection. Common discovery module **306e** may therefore also be designed as a low-power receiver. In some aspects, common discovery module **306e** may operate at a significantly lower power, and may be continuously kept active while still saving power compared to regular discovery scanning procedures (e.g., by communication modules **306a-306d**).

In some aspects, common discovery module **306e** may be implemented in as a hardware-defined module, for example, one or more dedicated hardware circuits or FPGAs. In some aspects, common discovery module **306e** may be implemented as a software-defined module, for example, as one or more processors executing program code that defines arithmetic, control, and I/O instructions (e.g., software and/or firmware) stored in a non-transitory computer-readable storage medium. In some aspects, common discovery module **306e** may be implemented as a combination of hardware-defined and software-defined components.

FIG.**5** shows method **500** outlining the common discovery procedure executed by terminal device **200** in accordance with some aspects.

As shown in FIG. **5**, controller **308** may perform radio communications in **510** according to the radio access protocols of one or more of communication modules **306a-306d** and may thus support the underlying RAT connections for one or more of communication modules **306a-306d**.

At **520**, controller **308** may determine whether to trigger discovery at any of communication modules **306a-306d**. In some aspects, discovery can be triggered, for example, during initial power-on procedures, following loss of coverage, and/or upon detection of poor radio measurements (low signal power or poor signal quality).

When controller **308** determines that discovery should not be triggered for any of communication modules **306a-306d**, controller **308** may return to **510** to continue performing conventional radio communications with communication modules **306a-306d**. In some aspects, controller **308** may keep common discovery module **306e** active and continuously operate common discovery module **306e** independent of communication modules **306a-306d**. Controller **308** may therefore continue collecting discovery results from common discovery module **306e**, even during conventional radio communication operation of communication modules **306a-306d**.

When controller **308** determines that discovery should be triggered for one or more communication modules **306a-306d**, controller **308** may trigger discovery at common discovery module **306e** in **530**. In some aspects, controller **308** can trigger discovery at common discovery module **306e** by activating common discovery module **306e** and commanding common discovery module **306e** to perform discovery.

Subsequently, common discovery module **306e** may then proceed to perform discovery by monitoring a common discovery channel (as will be later detailed) for discovery signals that include discovery information for various network access nodes. Common discovery module **306e** may decode any detectable discovery signals to obtain the discovery information included therein and provide the discovery information to controller **308** to complete **530**. There may be certain challenges associated with monitoring the common discovery channel in **530**. For example, as further described below, the network access nodes cooperating with the common discovery channel scheme may operate in a distributed scheme, where multiple network access nodes share the common discovery channel to broadcast their own respective discovery signals, or in a centralized scheme, where a single network access node broadcasts a common discovery signal on the common discovery channel that contains discovery information for other network access nodes. For distributed schemes, the network access nodes may utilize a contention-based mechanism and consequently utilize carrier sensing to detect channel occupancy of the common discovery channel. This may help in avoiding collisions, as a network access node that detects that the common discovery channel is occupied may initiate a backoff procedure before attempting to transmit its discovery signal. In centralized schemes, terminal device **200** may tune common discovery module **306e** to the common discovery channel and decode the discovery information from any common discovery channels that were broadcasted on the common discovery channel. In some aspects, the common discovery channel may utilize a simple modulation scheme in a channel with strong transmission characteristics (e.g., a common discovery channel allocated in sub-GHz frequencies), which may improve reception at terminal devices.

In **540**, controller **308** may then proceed with subsequent (e.g., ‘post-discovery) communication operations for RAT connection of one or more communication modules **306a-306d** depending on the network access nodes represented by the obtained discovery information. For example, if the discovery information indicates that viable network access nodes are within range and available for connection, for example, if the discovery information indicates that network access node **216** is available for a RAT connection of the fourth RAT, controller **308** may modify the RAT connection of fourth communication module **306d** to connect with network access node **216**. Through common discovery module **306e**, controller **308** may thus obtain discovery information in **530** without utilizing communication modules **306a-306d.**

In some aspects, various options for subsequent communication operations in **540** include unilateral radio interactions with network access nodes, e.g., actions that controller **308** unilaterally performs without reciprocal action from network access nodes. For example, the controller **308** can perform radio measurements on a discovered network access node, and/or receive broadcast information of a discovered network access node. In some aspects, various options for subsequent communication operations in **540** include bilateral radio interactions with network access nodes, e.g., actions that controller **308** performs with reciprocal action from network access nodes. For example, the controller **308** can pursue and potentially establish a bidirectional connection with a discovered network access node.

In some aspects, common discovery module **306e** can be configured to constantly monitor the common discovery channel (as opposed to being explicitly commanded by controller **308** as in **530**). Upon detection of discovery signals on the common discovery channel, common discovery module **306e** can be configured to report the detected discovery information to controller **308**. Regardless, common discovery module **306e** may perform discovery in place of communication modules **306a-306d**, thus allowing terminal device **200** to avoid battery power penalties. Such power savings may particularly be enhanced when multiple of communication modules **306a-306d** perform discovery concurrently as terminal device **200** may utilize a single, low-power receiver in common discovery module **306e** instead.

In some aspects, network access nodes of various radio access technologies may cooperate by broadcasting discovery signals on the common discovery channel that are consequently detectable by common discovery module **306e**. Specifically, network access nodes may broadcast discovery information (which would conventionally be broadcast on RAT-specific discovery channels) on the common discovery channel, thus enabling terminal devices to employ a common discovery module to monitor the common discovery channel.

In some aspects, network access nodes may participate in the broadcast of a common discovery channel according to either a centralized or distributed broadcast architecture. Both options may enable terminal devices such as, for example, terminal device **200** to employ common discovery module **306e** according to method **500** to obtain discovery information for network access nodes.

In some aspects, in a centralized broadcast architecture, a single centralized network access node, also referred to as a centralized discovery node, may broadcast discovery signals for one or more other network access nodes, which may either use the same or different radio access technologies as the centralized discovery node. Accordingly, the centralized discovery node may be configured to collect discovery information for one or more other network access nodes and generate a common discovery signal that includes the discovery information for both the centralized and one or more other network access nodes. The centralized discovery node may then broadcast the common discovery signal on the common discovery channel, thus producing a common discovery signal containing discovery information for a group of network access nodes. Common discovery module **306e** may therefore be able to discover all of the group of network access nodes by monitoring the common discovery channel and reading the common discovery signal broadcast by the centralized network access node.

Because common discovery module **306e** is capable of monitoring discovery information of network access nodes associated with a variety of radio access technologies, communication modules **306a-306d** of terminal device **200** can remain idle with respect to discovery operations. While controller **308** may still operate communication modules **306a-306d** for non-discovery operations, such as conventional radio communication procedures related to reception and transmission of other control and user data, terminal device **200** may nevertheless conserve significant battery power by performing discovery solely at common discovery module **306e**.

In some aspects, in a distributed broadcast architecture, an individual network access node (which may also be a relay node or relay device) may continue to broadcast its own discovery signal according to the radio access technology of the individual network access node. However, as opposed to broadcasting its discovery signal on the unique RAT-specific discovery channel, the network access node may broadcast its discovery signal on the common discovery channel. In order to enable terminal devices to receive the discovery signals with a common discovery module, each network access node may also broadcast its discovery signal using a common format, in other words, as a common discovery signal. Terminal device **200** may therefore employ common discovery module **306e** to monitor the common discovery channel for such common discovery signals broadcasted by individual network access nodes, thus eliminating the need for individual communication modules **306a-306d** to actively perform discovery.

backoff mechanisms Both the centralized and distributed discovery architectures may enable terminal devices such as terminal device **200** to perform discovery with a single common discovery module, thereby considerably reducing power consumption. Such may also simplify discovery procedures as discovery information for multiple network access nodes may be grouped together (either in the same common discovery signal or on the same common discovery channel), which may potentially enable faster detection.

FIG. 2 will now be utilized to describe a centralized discovery architecture in which a single centralized discovery node may assume discovery broadcast responsibilities for one or more other network access nodes. For example, in some aspects network access node **210** may assume discovery broadcast responsibilities for one or more of network access nodes **212-230.** In other words, network access node **210** may broadcast a common discovery signal on the common discovery channel that contains discovery information for one or more of network access nodes **212-230**. In order to generate the common discovery signal, network access node **210** may first collect discovery information for one or more of network access nodes **212-230**. Network access node **210** may employ any of a number of different techniques to collect the required discovery information, including any one or more of radio scanning, terminal report collection, backhaul connections, and via an external service (as further detailed below).

FIG. **6** shows an internal configuration of network access node **210** in accordance with some aspects. Network access node **210** may include antenna system **602**, radio system **604**, communication system **606** (including control module **608** and detection module **610**), and backhaul interface **612**. Network access node **210** may transmit and receive radio signals via antenna system **602**, which may be an antenna array including multiple antennas. Radio system **604** is configured to transmit and/or receive RF signals and perform PHY processing in order (1) to convert outgoing digital data from communication system **606** into analog RF signals for radio transmission through antenna system **602** and (2) to convert incoming analog RF signals received from antenna system **602** into digital data to provide to communication system **606**.

Control module **608** may control the communication functionality of network access node **210** according to the corresponding radio access protocols, which may include exercising control over antenna system **602** and radio system **604**. Each of radio system **504**, control module **508**, and detection module **510** may be structurally realized as hardware-defined modules, e.g., as one or more dedicated hardware circuits or FPGAs, as software-defined modules, e.g., as one or more processors executing program code that define arithmetic, control, and I/O instructions (e.g., software and/or firmware) stored in a non-transitory computer-readable storage medium, or as mixed hardware-defined and software-defined module. Backhaul interface **612** may be a wired (e.g., Ethernet, fiber optic, etc.) or wireless (e.g., microwave radio or similar wireless transceiver system) connection point for physical connection configured to transmit and receive data with other network nodes, which may be e.g., a microwave radio transmitter, or a connection point and associated components for a fiber backhaul link.

Network access node **210** may receive external data via backhaul interface **612**, which may include connections to other network access nodes, internet networks, and/or an underlying core network supporting the radio access network provided by network access node **210** (such as, for example, an LTE Evolved Packet Core (EPC)). In some aspects, backhaul interface **612** may interface with internet networks (e.g., via an internet router). In some aspects, backhaul interface **612** may interface with a core network that may provide control functions in addition to routing to internet networks. Backhaul interface **612** may thus provide network access node **210** with a connection to external network connections (either directly or via the core network), which may enable network access node **210** to access external networks such as the Internet. Network access node **210** may thus provide the conventional functionality of network access nodes in radio networks by providing a radio access network to enable served terminal devices to access user data.

As introduced above, network access node **210** may additionally be configured to act as a centralized discovery node by broadcasting a common discovery signal containing discovery information for other network access nodes such as one or more of network access nodes **212-230**. FIG. 7 shows method **700**, which details the general procedure performed by a centralized discovery node, such as network access node **210** in accordance with some aspects.

At **710**, network access node **210** can collect discovery information for other network access nodes. At **720**, network access node **210** can generate a common discovery signal with the collected discovery information. At **730**, network access node **210** can broadcast the common discovery signal on the common discovery channel, thus allowing a terminal device such as terminal device **200** to perform discovery for multiple radio access technologies using common discovery module **306e**. Network access node **210** may generate the common discovery signal with a predefined discovery waveform format, which may utilize, for example On/Off Key (OOK), Binary Phase Shift Keying (BPSK), Quadrature Amplitude Modulation (QAM, e.g., 16-QAM, 64-QAM, etc.). In some aspects, the common discovery signal may be a single-carrier waveform, while in other aspects the common discovery signal may be a multi-carrier waveform, such as an OFDM waveform or another type of multi-carrier waveform.

Accordingly, network access node **210** may first collect the discovery information for one or more of network access nodes **212-230** in **710**. Network access node **210** can utilize any one or more of a number of different discovery information collection techniques in **710**, including radio scanning, terminal report collection, backhaul connections to other network access nodes, and via an external service.

For example, in some aspects network access node **210** can utilize radio scanning in 710 to collect discovery information for other nearby network access nodes. Network access node **210** may therefore include detection module **610**, which may utilize antenna system **602** and radio system **604** to scan the various discovery channels of other radio access technologies in order to detect other network access nodes. Detection module **610** may thus be configured to process signals received on various different discovery channels to detect the presence of network access nodes broadcasting discovery signals on the various different discovery channels.

Although FIG. **6** depicts detection module **610** as utilizing the same antenna system **602** and radio system **604** as employed by network access node **210** for conventional base station radio access communications, in some aspects network access node **210** may alternatively include a separate antenna system and radio system uniquely assigned to detection module **610** for discovery information collection purposes. Detection module **610** can be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

In some aspects, detection module **610** is configured to implement analogous discovery signal detection as communication modules **306a-306d**. This allows detection module **610** to detect RAT-specific discovery signals by processing received signals according to dedicated radio access protocols and consequently identify the corresponding broadcasting network access nodes.

In some aspects, detection module **610** may utilize antenna system **602** and radio system **604** to scan discovery channels for a plurality of radio access technologies to detect network access nodes on the discovery channels. For example, detection module **610** may utilize antenna system **602** and radio system **604** to scan through one or more LTE discovery channels (e.g., LTE frequency bands for PSS/SSS sequences and MIBs/SIBs) in order to detect proximate LTE cells. Detection module **610** may similarly scan through one or more Wi-Fi discovery channels to detect proximate Wi-Fi APs, one or more UMTS discovery channels to detect UMTS cells, one or more GSM discovery channels to detect GSM cells, and one or more Bluetooth discovery channels to detect Bluetooth devices. Detection module **610** may similarly scan discovery channels for any one or more radio access technologies. In some aspects, detection module **610** may capture signal data for each scanned discovery channel and process the captured signal data according to the discovery signal format of the corresponding radio access technology in order to detect and identify any network access nodes broadcasting discovery signals thereon.

In the exemplary setting of FIG. **7**, in **710,** detection module **610** may identify one or more of network access nodes **212-230** during scan of discovery channels for one or more radio access technologies. For example, in an exemplary scenario where network access node **212** is an LTE base station and network access nodes **214-230** are Wi-Fi APs, network access node **210** may detect (1) network access node **212** during scan of LTE discovery channels and (2) one or more of network access nodes **214-230** during scan of Wi-Fi discovery channels. Detection module **610** may collect certain discovery information from each detected discovery signal, which network access node **210** may subsequently utilize to generate a common discovery signal for broadcast on the common discovery channel that contains discovery information for the detected network access nodes.

In some aspects, detection module **610** may collect both ’common’ information elements and ’RAT-specific’ information elements for the one or more network access nodes identified during discovery information collection, where common information elements may include general information associated with the identified network access node (regardless of the specific radio access technology) and RAT-specific information elements may include specific information that is unique to the parameters of the corresponding radio access technology.

For example, common information elements may include:

a. RAT (e.g., LTE/Wi-Fi/UMTS/GSM/etc.)
b. Frequency band and center frequency
c. Channel bandwidth
d. Service provider
e. Geographic Location (geopositional information such as GPS coordinates or relative navigational parameters that detail the position of a network access node relative to a terminal device)

RAT-specific information elements may include, for example:

a. for LTE/UMTS/GSM: PLMN ID, Cell ID, maximum data rate, minimum data rate
b. for Wi-Fi: Service Set ID (SSID), beacon interval, capability information, frequency-hopping/direct-sequence/contention free parameter sets, traffic indication map, Public/private network, authentication type, capability information, AP location info
c. for Bluetooth: Bluetooth address, frequency-hopping information,
d. RAT-dependent: radio measurements (signal strength, signal quality, etc.) and other performance metrics (cell loading, energy-per-bit, packet-/block-/bit-error-rates, retransmission metrics, etc.)

while other RATs may demand similar information as RAT-specific information elements.

In some aspects, detection module **610** may obtain such discovery information in **710** by detecting and reading discovery signals from network access nodes on the scanned discovery channels. As each radio access technology may have unique discovery signals (e.g., signal format and/or transmission scheduling), detection module **610** may execute a specific process to obtain the discovery information for each radio access technology.

For example, in an exemplary LTE setting, detection module **610** may obtain a Cell ID of an LTE cell (in the form of Physical Cell Identity (PCI)) by identifying a PSS-SSS sequence pair broadcasted by the LTE cell. Detection module **610** may obtain channel bandwidth by reading the Master Information Block (MIB) messages. Detection module **610** may obtain a PLMN ID for an LTE cell by reading, for example, SIB1 messages. Detection module **610** may accordingly collect such discovery information for one or more detected network access nodes and store (e.g., in a memory; not explicitly shown in FIG. 6) the discovery information for later broadcast in the common discovery signal.

Depending on the configuration of detection module **610**, radio system **604**, and antenna system **602**, in some aspects detection module **610** may be configured to perform the discovery channel scans for one or more radio access technologies in sequence or in parallel, for example, by scanning one or more discovery channels for one or more radio access technologies in series or simultaneously.

As introduced above, network access node **210** may utilize additional and/or alternative techniques in **710** to collect discovery information for the other network access nodes. Specifically, in some aspects, network access node **210** may utilize terminal report collection to obtain the discovery information for proximate network access nodes. For example, network access node **210** may request discovery reports from served terminal devices (via control signaling). Consequently, the served terminal devices may perform discovery scans and report discovery information for detected network access nodes back to network access node **210** in the form of measurement reports.

For example, detection module **610** may trigger transmission of control signaling to request measurement reports from terminal devices **200** and **202**. Terminal devices **200** and **202** may then perform discovery channel scans for various radio access technologies (using e.g., communication modules such as communication modules **306a-306d**) to obtain discovery information (e.g., common and RAT-specific information elements) for one or more detected network access nodes and report the discovery information back to network access node **210**. Detection module **610** may receive the reports and collect the discovery information for reported network access nodes. Accordingly, instead of (or in addition to) having detection module **610** actively perform radio scans to discover proximate network access nodes, served terminal devices may perform the discovery scans and report results to network access node **210**.

In some cases, terminal device **200** may discover network access node **216** while terminal device **202** may discover network access nodes **212**, **220,** and **224** as shown in FIG. **2.** Terminal devices **200** and **202** may thus obtain the discovery information (common and RAT-specific information elements) for one or more discovered network access nodes and report the discovery information to network access node **210** in the form of discovery reports. The discovery reports can be received by network access node **210** via antenna system **602** and be processed at detection module **610**. Network access node **210** may thus obtain the discovery information in **710** for the other network access nodes.

Although terminal report collection may involve terminal devices to perform discovery scans (as opposed to radio scanning in **710** in which network access node **210** performs the necessary radio operations and processing), this may still be advantageous and enable battery-power consumption at terminal devices. For example, network access node **210** may instruct a first group of terminal devices to perform discovery on certain radio access technologies (e.g., to scan certain discovery channels) and a second group of terminal devices to perform discovery on other radio access technologies (e.g., to scan other discovery channels). Network access node **210** may then consolidate the discovery information of discovered radio access nodes provided by both groups of terminal devices in **720** and broadcast the consolidated discovery information on the common discovery channel in **730**. Both groups of terminal devices may thus obtain the discovery information from both radio access technologies while only having to individually perform discovery on one radio access technology, thus conserving battery power.

In some aspects, terminal devices may be able to utilize discovery information obtained by other terminal devices as the terminal devices move to different geographic locations. For example, in an exemplary scenario, terminal device **200** may report network access node **216** during terminal report collection while terminal device **202** may report network access nodes **220** and **224** during terminal report collection. As geographic location information may be included in the discovery information, if terminal device **200** moves to a new geographic position that is closer to the geographic locations of network access nodes **220** and **224**, terminal device **200** may rely on discovery information previously received from network access node **210** on the common discovery channel to discover network access nodes **220** and **224** without performing a full discovery procedure. Accordingly, terminal device **200** may receive the discovery information for network access nodes **220** and **224** via common discovery module **306e** and utilize such discovery information in the event that terminal device **200** moves within range of network access nodes **220** and **224**. As previously noted, geographic location information in a discovery signal may include geopositioning information such as GSP coordinates or another ’absolute’ location of a network access node (e.g., longitude and latitude coordinates) or other information that indicates a relative location of a network access node to terminal device **200** (e.g., a timestamped signal that can be used to derive the distance and/or other information that provides directional information that indicates the direction of a network access node from a terminal device).

Additionally or alternatively, in some aspects network access node **210** may employ backhaul connections to obtain discovery information in **710** for broadcast on the common discovery channel in **730**. In particular, network access node **210** may be connected with other network access nodes either directly or indirectly via backhaul interface **612** (either wireless or wired) and may utilize backhaul interface **612** to receive discovery information from other network access nodes in **710**. For example, network access node **210** may be connected with one or more of network access nodes **212-230** via backhaul interface **612**, which may transmit their respective discovery information to network access node **210** in **710**. Network access node **210** may thus consolidate the received discovery information in **720** to generate the common discovery signal and broadcast the common discovery signal in **730**. Detection module **610** may thus interface with backhaul interface **612** in order to receive and consolidate the discovery information.

There exist numerous variations in the use of backhaul links to obtain discovery information. For example, in some aspects, network access node **210** may be directly connected to the other network access nodes via backhaul interface **612**, such as, for example, over an X2 interface with other network access nodes, such as network access node **212**. In some aspects, network access node **210** may additionally be directly connected with network access nodes of other radio access technologies, such as directly connected with WLAN Aps, such as network access nodes **214-230,** over an inter-RAT interface through backhaul interface **612**. Network access node **210** may receive the discovery information for other network access nodes via backhaul interface **612** and broadcast a common discovery signal accordingly.

In some aspects, network access node **210** may additionally be able to interface with other centralized discovery nodes (or similarly functioning network access nodes) via backhaul interface **612**. For example, a first centralized discovery node (e.g., network access node **210**) may collect discovery information for a first plurality of network access nodes discoverable by the first centralized discovery node (e.g., network access nodes **214-222**). A second centralized discovery node (e.g., network access **212**) may collect discovery information for a second plurality of network access nodes discoverable by the second centralized discovery node (e.g., network access nodes **224-230**). In various aspects, the first and second centralized discovery node may a discovery collection technique to collect the discovery information for the respective first and second plurality of network access nodes, such as, for example, one or more of radio scanning, terminal report collection, backhaul connections, or an external service. The first centralized discovery node may then provide the collected discovery information for the first plurality of network access nodes to the second centralized discovery node, and the second centralized discovery node may then provide the collected discovery information for the second plurality of network access nodes to the first centralized discovery node. The first centralized discovery node may then consolidate the resulting 'combined' discovery information (for the first and second pluralities of network access nodes) and generate a first common discovery signal. The second centralized discovery node may likewise consolidate the resulting 'combined' discovery information (for the first and second pluralities of network access nodes) and generate a second common discovery signal. The first and second centralized discovery nodes may then transmit the respective first and second common discovery signals, thus producing common discovery signals that contain discovery information for network access nodes that are discoverable at different centralized discovery nodes.

Additionally or alternatively, in some aspects network access node **210** may employ an external service to obtain discovery information for other network access nodes in **710**. The external service may function, for example, as a database located in an Internet-accessible network location, such as a cloud internet server, and may provide discovery information to network access node **210** via backhaul interface **612**. Detection module **610** may thus receive discovery information via backhaul interface **612** in **710** and proceed to consolidate the discovery information to generate a common discovery signal in **720**.

For example, in the exemplary setting shown in FIG. **8,** network access node **210** may connect with an external database **800** via backhaul interface **612**. External database **800** may be in an Internet-accessible network location and thus may be accessible by network access node **210** over the Internet via backhaul interface **612**. External database **800** may similarly interface with other network access nodes and may act as a repository for discovery information. For instance, one or more other network access nodes may provide external database **800** with their discovery information. Network access node **210** may then query external database **800** over backhaul interface **612** for discovery information of other network access nodes in **710**, in response to which external database **800** may transmit discovery information to network access node **210** over backhaul interface **612**. Such may thus not require a direct connection between network access node **210** and other network access nodes to obtain discovery information but may use a database manager to maintain and update the discovery information in external database **800**.

In some aspects of radio sensing and terminal report collection, network access node **210** may already implicitly have knowledge that the obtained discovery information pertains to proximate network access nodes. For example, network access node **210** may assume that network access nodes that were discovered during radio sensing and network access nodes reported by terminal devices served by network access node **210** are located relatively proximate to network access node **210** (e.g., on account of their detectability via radio signals).

In certain backhaul link setups, the backhaul connections may be designed such that only proximate network access nodes contain direct backhaul links. For example, each of network access nodes **214-222** may have a direct backhaul connection to network access node **210** while other network access nodes located further from network access node **210** may not have a direct backhaul connection to network access node **210**. Backhaul link setups may thus in certain cases implicitly provide information as to the proximity of other network access nodes.

In the case of external database **800**, network access node **210** may not be able to implicitly determine which network access nodes represented in external database **800** are proximate to network access node **210**. As network access node **210** will ultimately broadcast the obtained discovery information as a common discovery signal receivable by proximate terminal devices, network access node **210** may desire to only obtain discovery information for proximate terminal devices.

Accordingly, when querying external database **800** for discovery information, in some aspects network access node **210** may indicate geographic location information for network access node **210**. In response, external database **800** may consequently retrieve discovery information for one or more network access nodes proximate to the indicated geographic location information and provide this discovery information to network access node **210**.

In some aspects, network access node **210** may either specify a single location, e.g., the geographic location of network access node **210**, or a geographic area, e.g., the coverage area of network access node **210**. In response, external database **800** may retrieve discovery information for the corresponding network access nodes and provide the discovery information to network access node **210**. In some aspects, external database **800** can include a hash table (e.g., a distributed hash table) to enable quick identification and retrieval of discovery information based on geographic location inputs.

In some aspects, network access node **210** may employ any of a number of different techniques in **710** to collect discovery information for other network access nodes with detection module **610**. Detection module **610** may consolidate the collected discovery information and provide the discovery information to control module **608**, which may generate a common discovery signal with the collected discovery information in **720**. Such may include encoding the collected discovery information in as digital data with a predefined format that is known at both network access node **210** and common discovery module **306e**. Many different such coding schemes may be available and employed in order to generate the common discovery signal.

Regardless of the particular predefined format employed for the common discovery signal, control module **608** may encode the relevant discovery information for one or more of the discovered network access nodes in the common discovery signal, e.g., the common information elements (RAT, frequency band and center frequency, channel bandwidth, service provider, and geographic location) and RAT-specific information elements (depending on the particular RAT). For example, network access node **210** may collect discovery information for network access node **210** and network access nodes **214-230** in **710** and may encode the discovery information in a common discovery signal in **720**. Control module **608** may then broadcast the common discovery signal in **730** on the common discovery channel via radio system **604** and antenna system **602**.

In some aspects, the common discovery channel may be predefined in advance in order to enable the centralized network access nodes to know which frequency (or frequencies) to broadcast the common discovery channel and to enable the common discovery modules at each terminal device to know which frequency (or frequencies) to monitor for the common discovery signal. Any of a variety of different channel formats may be utilized for the common discovery channel, which may either be a single- or multi-carrier channel with specific time-frequency scheduling (e.g., on specific carriers/subcarriers with a specific periodicity or other timing parameters). The common discovery channel may be standardized (e.g., from a standardization body such as the 3GPP, IEEE or other similar entities) and/or defined by regulation in different geographic regions (e.g., for different countries). In some aspects, the communication protocol used for the common discovery channel may be a broadcast protocol, which may not require a handshake or contact from terminal devices for the terminal devices to receive and decode discovery signals on the common discovery channel. This format of the discovery signals on the common discovery channel may enable terminal devices to utilize a simple digital receiver circuit to receive discovery signals and obtain the information encoded thereon. Each terminal device may then be able to undergo its own decision-making process based on its unique needs and capabilities (e.g., which network the terminal device is attempting to connect to).

In some aspects, the common discovery channel may either be a licensed frequency band (e.g., allocated for a specific radio access technology and licensed by an operator, e.g., LTE/UMTS/GSM or other cellular bands) or an unlicensed frequency band (e.g., not allocated for a specific radio access technology and openly available for use; e.g., Wi-Fi and Bluetooth in the Industrial, Science, and Medical (ISM bands). The common discovery channel may alternatively be a unique frequency band that is specifically designated (e.g., by a regulatory body) for authorized entities for broadcasting discovery information.

Furthermore, while certain examples herein may refer to a single common discovery channel, in some aspects, multiple common discovery channels (e.g., each with a different frequency allocation) may be employed. In such aspects, the common discovery modules can be configured to monitor (e.g., in parallel or sequentially) multiple different common discovery channels or, alternatively, multiple common discovery modules can be each dedicated to scan one or more of the common discovery channels. While such may slightly complicate common discovery procedures at common discovery modules, such may alleviate congestion if multiple broadcast nodes (either centralized or distributed discovery nodes) are broadcasting common discovery signals.

In some aspects, the other network access nodes that are not functioning as the centralized discovery node may not be configured to cooperate. For example, network access node **210** can be configured to perform discovery information collection techniques detailed above to unilaterally obtain discovery information for network access nodes **212-230** and broadcast such discovery information on the common discovery channel. Other network access nodes, such as network access nodes **212-230** can also broadcast discovery signals on their respective RAT-specific discovery channels. Accordingly, some aspects that use centralized discovery nodes may include some network access nodes that are specifically configured according to these aspects and other network access nodes that are not specifically configured according to these aspects.

Given operation of centralized discovery nodes such as network access node **210** according to these aspects, controller **308** may utilize common discovery module **306e** to scan for common discovery signals on the common discovery channel as previously detailed regarding method **500** in FIG. **5**. Common discovery module **306e** may thus detect the common discovery signal broadcast by network access node **210** and may consequently decode the common discovery signal (according to the same predefined format employed by control module **608** to generate the common discovery signal) to recover the discovery information encoded in the common discovery signal. Common discovery module **306e** may thus obtain the discovery information for network access nodes **210-230** and may proceed to report the discovery information to controller **308** (e.g., **530**). Controller **308** may then proceed with post-discovery radio operations based on the received discovery information (e.g., **540** of method **500**), which may include, for one or more of the radio access technologies supported by terminal device **200** , unilateral (e.g., performing radio measurements on a discovered network access node, receiving broadcast information of a discovered network access node) and/or bilateral (e.g., pursuing and potentially establishing a bidirectional connection with a discovered network access node) radio interactions with various network access nodes. In some aspects, the specific usage of the discovery information at terminal device **200** may vary between the various radio access technologies and over different scenarios and may be directed by controller **308**. For example, controller **308** may perform unilateral and/or bilateral radio interactions with one or more network access nodes according to the specific protocols of the respective radio access technologies. For example, if network access node **220** is configured according to e.g., Wi-Fi, controller **308** may perform radio measurements, receive broadcast information, establish a connection with, and/or transmit and receive data with network access node **220** according to the Wi-Fi-specific protocols. In another example, if network access node **212** is configured according to e.g., LTE, controller **308** may perform radio measurements, receive broadcast information, establish a connection with, and/or transmit and receive data with network access node **212** according to the LTE-specific protocols. In another example, controller **308** may be managing e.g., an LTE radio connection at e.g., communication modules **306a**. If the LTE radio connection is currently in a radio idle state and controller **308** triggers a transition to a radio connected state, controller **308** may utilize discovery information (e.g., obtained from receipt of the common discovery signal) to identify an LTE network access node and initiate establishment and execution of an LTE radio connection with communication module **306a** according to radio idle state LTE procedures. Controller **308** may similarly execute unilateral and bilateral radio interactions with discovered network access nodes depending on RAT-specific protocols and the current scenario of any RAT connections.

Accordingly, in accordance with some aspects of the common discovery signal framework, terminal device **200** may avoid separately performing discovery with communication modules **306a-306d** and may instead perform a common discovery procedure at common discovery module **306e**, thus potentially conserving significant battery power.

In some aspects, geographic location information can be important, in particular in the case of centralized discovery nodes. More specifically, by receiving discovery signals on the common discovery channel, terminal device **200** may be able to avoid having to physically detect (e.g., with reception, processing, and analysis of radio signals) one or more network access nodes during local discovery procedures. Instead, centralized discovery nodes may obtain the discovery information and report the discovery information to terminal device **200** via the common discovery channel. As terminal device **200** may not have physically detected each network access node, terminal device **200** may not actually know whether each network access node is within radio range. Accordingly, in some aspects terminal device **200** may consider geographic location information of the network access nodes in order to ensure that a network access node is actually within range before attempting post-discovery operations with the network access node (such as, for example, attempting to establish a connection or perform radio measurements).

As noted above, in some aspects, a centralized discovery node, such as network access node **210**, may include geographic information as a common information element of discovery information broadcasted on the common discovery channel. For example, network access node **210** may obtain location information in **710**, such as by estimating the geographic location of a network access node (e.g., via radio sensing and location estimation procedures) or by explicitly receiving (e.g., wirelessly or via backhaul interface **612**) the geographic location of a network access node. In the example of FIG. **2**, network access node **210** may identify the geographic locations of network access node **212** and network access nodes **214-230,** which may either be explicit geographic positions (e.g., latitude and longitude) or a general geographic areas or regions. Control module **608** may then encode such geographic location information as discovery information in the common discovery signal, which terminal device **200** may receive and subsequently recover from the common discovery signal at controller **308**.

Accordingly, in some aspects when controller **308** is deciding which network access node to select for further post-discovery radio operations, controller **308** may compare the current geographic location of terminal device **200** (e.g., obtained at a positioning module of terminal device **200** (not explicitly shown in FIG. **3**) or reported by the network) to the geographic location of the network access nodes reported in the common discovery signal. Controller **308** may then select a network access node from the network access nodes reported in the common discovery signal based on the geographic location information, such as by selecting the most proximate or one of the most proximate reported network access nodes relative to the current geographic location of terminal device **200**.

In some aspects, a centralized discovery node, such as network access node **210,** may alternatively apply power control to transmission of the common discovery signal in **730** in order to reduce the terminal processing overhead involved in comparing geographic locations. For example, network access node **210** may broadcast a low-power common discovery signal that only contains discovery information for network access nodes that are significantly proximate to network access node **210**, for example, within a certain radius. Accordingly, as the common discovery signal is broadcast with low power, only terminal devices that are close to network access node **210** may be able to receive the common discovery signal. Therefore, these terminal devices that are able to receive the common discovery signal will also be located close to the network access nodes reported in the low-power common discovery signal. In such a scenario, the terminal devices may assume that the network access nodes reported in the common discovery signal are geographically proximate and thus may substantially all be eligible for subsequent communication operations, such as, for example, establishing a radio connection. Such power-controlled common discovery signals may act according to radial distance. Additionally or alternatively, in some aspects network access node **210** may utilize sectorized or directional (e.g., with beamsteering) antennas in order to broadcast certain common discovery signals in specific directions where the directional common discovery channels contain discovery information for network access nodes located in the specific direction relative to network access node **210**.

In some scenarios, these techniques may be problematic as terminal devices that are located further away from the centralized discovery node may not be able to receive the low-power common discovery signal. Accordingly, network access node **210** may instead assign different coverage sub-areas (within its overall coverage area) as different 'zones', e.g., Zone 1, Zone 2, Zone 3, etc., where each zone implies a certain distance from network access node **210**. When network access node **210** broadcasts the common discovery signal in **730**, network access node **210** may include zone information that indicates the coverage zone in which it is transmitting. Accordingly, terminal devices such as, for example, terminal device **200** may then only examine the network access nodes reported within the current zone of terminal device **200** instead of having to use geographic location information to identify which network access nodes are proximate (e.g., within a predefined radius of the current location of terminal device **200**). This may alleviate the processing overhead involved in geographic location comparisons at terminal device **200**.

While the description of centralized discovery architectures presented above may focus on a single centralized discovery node, e.g., network access node **210**, in some aspects centralized discovery architectures may include multiple centralized discovery nodes, such as, for example, various centralized discovery nodes that are geographically positioned to serve a specific area. Consequently, terminal devices may receive common discovery signals from multiple centralized discovery nodes.

For example, in an exemplary aspect network access node **210** may be a centralized discovery node responsible for discovery broadcasting of network access nodes within the coverage area of network access node **210** and accordingly may broadcast discovery information for network access nodes **214-222** in the common discovery signal. Likewise, network access node **212** may be a centralized discovery node responsible for broadcasting discovery information for network access nodes **224-230**. Network access nodes **210** and **212** may therefore both broadcast common discovery signals on the common discovery channel, which may be received by terminal device **200** (which as shown in the exemplary scenario of FIG. **2** may be within the coverage area of network access nodes **210** and **212**).

Terminal device **200** may therefore receive discovery information from two (or more) centralized discovery nodes and thus may receive multiple sets of network access nodes via the common discovery procedure. Location information (either specific locations or zone regions) for network access node may be important in such scenarios as terminal device **200** may not be located proximate to one or more of network access nodes reported by network access nodes **210** and **212.** Instead, terminal device **200** may only be within range of, for example, network access nodes **220** and **224** as shown in FIG. **2**.

Accordingly, via either specific location information or zone location information, terminal device **200** can be configured to use its own geographic location to identify which network access nodes are within range and proceed to perform subsequent communication procedures accordingly. Additionally, multiple centralized discovery nodes may be deployed in a single frequency network where the centralized discovery nodes concurrently transmit the same discovery signal in a synchronized manner (which may require appropriate coordination between the centralized discovery nodes).

Furthermore, while the examples presented above focus on the use of a cellular access node, for example, network access nodes **210** and/or **212**, as centralized discovery nodes, any type of network access nodes may be equivalently employed as a centralized discovery node regardless of radio access technology. For example, one or more of network access nodes **214-230** may additionally or alternatively function as a centralized discovery node. Network access nodes with longer-distance broadcast capabilities such as cellular base stations may be advantageous in some aspects due to the increased broadcast range of common discovery signals.

In some aspects, centralized discovery nodes may or may not serve as conventional network access nodes. For example, in some examples detailed above, network access nodes **210**, **212**, and **214-230** were described as being network access nodes (such as base stations or access points) that can provide RAT connections to terminal devices to provide terminal devices with user data traffic. However, in some aspects, centralized discovery nodes may alternatively be deployed specifically for common discovery channel purposes. For example, a third party may deploy one or more centralized discovery nodes that are configured to provide common discovery channel services but not configured to provide other conventional radio access services. Conventional network operators (e.g., mobile network operators (MNOs), public Wi-Fi network providers, etc.) may then be able to license use of the common discovery channel provided by the third party centralized discovery nodes.

In some aspects, the common discovery channel may additionally or alternatively be broadcasted via a distributed discovery architecture. In contrast to centralized discovery architectures where centralized discovery nodes assume the discovery broadcasting responsibilities for one or more other network access nodes, each network access node in a distributed discovery architecture may broadcast a unique discovery signal. However, as opposed to using separate a RAT-specific discovery channel depending on radio access technology, the network access nodes in distributed discovery architectures may each broadcast their respective discovery signals on a common discovery channel. Accordingly, terminal devices may perform discovery with a common discovery module that scans the common discovery channel as previously detailed regarding method **500** of FIG. **5** and consequently avoid having to activate multiple separate communication modules to perform discovery for multiple radio access technologies.

For example, returning to the exemplary setting of FIG. **2**, network access nodes **210**, **212**, and **214-230** may act as a distributed discovery node and accordingly broadcast a unique discovery signal on the same common discovery channel that contains the discovery information (common and RAT-specific information elements) of the respective network access node. Accordingly, terminal devices such as terminal device **200** may utilize a single common discovery module, such as common discovery module **306e**, to monitor the common discovery channel and read the respective discovery signals broadcast by each distributed discovery node. Accordingly, terminal device **200** may not have to activate communication modules **306a-306d** for discovery and may as a result conserve significant power.

More specifically, network access nodes **210**, **212**, and **214-230** may identify its own common and RAT-specific information elements (according to the corresponding radio access technology) and encode this discovery information into a discovery signal (e.g., at a control module such as control module **608**). In order to simplify decoding at terminal devices, network access nodes **210**, **212**, and **214-230** may encode the respective discovery signals with the same predefined format at control module **608**, thus resulting in multiple discovery signals that each contain unique information but are in the same format. Various digital coding and modulation schemes are well-established in the art and any may be employed as the predefined format.

Network access nodes **210**, **212**, and **214-230** may then each broadcast their respective discovery signals on the common discovery channel with the predefined discovery signal format, thus enabling terminal devices, such as terminal device **200**, to monitor the common discovery channel and detect discovery signals according to the predefined discovery signal format with common discovery module **306e** as detailed regarding method **500**. As the predefined discovery signal format is known at common discovery module **306e**, common discovery module **306e** may be configured to perform signal processing to both detect discovery signals (e.g., using reference signals or similar techniques) and decode detected discovery signals to recover the original discovery information encoded therein.

Common discovery module **306e** may provide such discovery information to controller **308**, which may proceed to trigger subsequent communication operations with any of communication modules **306a-306d** based on the obtained discovery information and current status of each RAT connection.

As multiple of network access nodes **210**, **212**, and **214-230** may be broadcasting discovery signals on the common discovery channel, there may be well-defined access rules to minimize the impact of transmission conflicts. For example, if network access node **210** and network access node **216** both broadcast their respective discovery signals on the common discovery channel at overlapping times, the two discovery signals may interfere with each other and complicate detection and decoding of the discovery signals at common discovery module **306e**.

Accordingly, in some aspects, broadcast on the common discovery channel by distributed discovery nodes (including cases where multiple centralized discovery nodes act as distributed discovery nodes to share the same common discovery channel(s)) may be regulated by a set of access rules and broadcast transmission restrictions, such as maximum transmit power, maximum duty cycle, maximum single transmission duration. For example, in some aspects, one or more distributed discovery nodes may be constrained by a maximum transmit power and may not be permitted to transmit a discovery signal on the common discovery channel above the maximum transmit power. In another example, one or more distributed discovery nodes may be constrained by a maximum duty cycle and may not be permitted to transmit a discovery signal on the common discovery channel with a duty cycle exceeding the maximum duty cycle. In another example, one or more distributed discovery nodes may be constrained by a maximum single transmission and may not be permitted to transmit a discovery signal for a continuous period of time exceeding the maximum single transmission duration.

Such access rules may be predefined and preprogrammed into each distributed discovery node, thus enabling each distributed discovery node to obey the access rules when broadcasting discovery signals on the common discovery channel.

Additionally or alternatively, in some aspects the distributed discovery nodes e.g., network access nodes **210**, **212**, and **214-230** may utilize an active sensing mechanism similar to carrier sensing or collision detection and random backoff (as in e.g., Wi-Fi 802.11a/b/g/n protocols) in order to transmit their respective discovery signals without colliding with the discovery signals transmitted by other of network access nodes **210**, **212**, and **214-230** on the common discovery channel.

In such an active sensing scheme, distributed discovery nodes (including cases where multiple centralized discovery nodes act as distributed discovery nodes to share the same common discovery channel(s)) may employ 'listen-before-talk' and/or carrier sensing techniques (e.g., handled at control module **608** and radio system **604**) in order to perform radio sensing on the common discovery channel prior to actively broadcasting discovery signals. For example, in an exemplary scenario network access node **210** may prepare to transmit a discovery signal on the common discovery channel. In order to prevent collisions with transmissions from other distributed discovery nodes on the common discovery channel, network access node **210** may first monitor the common discovery channel (e.g., over a sensing period) to determine whether any other distributed discovery nodes are transmitting on the common discovery channel. For example, in some aspects network access node **210** may measure the radio energy on the common discovery channel and determine whether the radio energy is above a threshold (e.g., in accordance with an energy detection scheme). If the radio energy on the common discovery channel is below the threshold, network access node **210** may determine that the common discovery channel is free; conversely, if the radio energy on the common discovery channel is above the threshold, network access node **210** may determine that the common discovery channel is busy, e.g., that another transmission is ongoing. In some aspects, network access node **210** may attempt to decode the common discovery channel (e.g., according to the common discovery signal format) to identify whether another network access node is transmitting a common discovery signal on the common discovery channel.

If network access node **210** determines that the common discovery channel is free, network access node may proceed to transmit its common discovery signal on the common discovery channel. If network access node **210** determines that the common discovery channel is busy, network access node **210** may delay transmission of its common discovery signal, monitor the common discovery channel again, and re-assess whether the common discovery channel is free. Network access node **210** may then transmit its common discovery signal once the common discovery channel is free. In some aspects, the network access nodes using the common discovery channel may utilize a contention-based channel access scheme such as carrier sensing multiple access (CSMA), CSMA Collision Avoidance (CSMA/CA), or CSMA Collision Detection (CSMA/CD) to govern access to the common discovery channel. Such may prevent collisions between common discovery signals transmitted by different network access nodes and prevent signal corruption on the common discovery channel. In some aspects, network access nodes may handle collisions unilaterally, and terminal devices may not need to address collisions. For example, if there is a collision between two (or more) network access nodes in transmitting a discovery signal on the common discovery signal, the involved network access nodes may detect the collision and perform a backoff procedure before they attempt to transmit the discovery signal again. There may be problems of hidden node, where network access nodes may be too far from one another to detect collisions observed at a terminal device (e.g., where the terminal device is in between two network access nodes and will observe collisions that the network access nodes may not detect at their respective locations). In various aspects, participating network access nodes may utilize different techniques to address the hidden node problem. For example, network access nodes may utilize repetition, in other words, by repeating transmission of a discovery signal multiple times. In some aspects, network access nodes may utilize random backoff, which may prevent two (or more) network access nodes from detecting a transmission by a third network access node and both attempting to transmit at the same time after using the same backoff time. In some aspects, the network access nodes may utilize a centrally managed scheme, such as where each network access node reports to a coordinating entity. The coordinating entity may be a designated network access node or a radio device that is specifically dedicated to managing access to the common discovery channel. The coordinating entity may grant access to the common discovery channel individually to network access nodes. In some aspects, each network access node may report to a single coordinating entity which then does the broadcast and is in communication with other nearby coordinating entities (that also perform broadcast) and have a way of managing their broadcasts so they do not overlap, for example by scrambling the signal using an orthogonal codes such as Zadoff-Chu sequence.

In some aspects, distributed discovery nodes (including cases where multiple centralized discovery nodes act as distributed discovery nodes to share the same common discovery channel(s)) may utilize cognitive radio technologies.

In particular, cognitive radio devices can be configured to detect available, or 'free' channels, that are not being utilized. Cognitive radio devices may then seize a detected available channel and use the channel for radio transmission and reception. Accordingly, in some aspects, there may be a set of common discovery channels that are eligible for use as a common discovery channel. A distributed discovery node such as network access node **210** may be preparing to transmit a discovery signal and may aim to find an available time-frequency resource to use as the common discovery channel to transmit the discovery signal. Accordingly, in some aspects, network access node **210** may be configured to utilize cognitive radio techniques to adaptively identify an available common discovery channel from the set of common discovery channels that is available. For example, network access node **210** may evaluate radio signals received on one or more of the set of common discovery channels and determine whether any of the set of common discovery channels are free, such as e.g., by performing energy detection (e.g., to detect radio energy from any type of signal) or discovery signal detection (e.g., to detect discovery signals by attempting to decode the radio signals). Upon identifying an available common discovery channel, network access node **210** may utilize the available common discovery channel to transmit a discovery signal. In some aspects, the set of common discovery channels may be predefined, which may enable terminal devices to be aware of which frequency channels are common discovery channels and therefore to know which frequency channels to scan for discovery signals on. In some aspects, distributed discovery nodes may be configured to broadcast the set of common discovery channels (e.g., as part of the discovery signal) in order to inform terminals which frequency channels are eligible for use as a common discovery channel.

In some aspects, distributed discovery nodes (including cases where multiple centralized discovery nodes act as distributed discovery nodes to share the same common discovery channel(s)) may operate a single frequency network to broadcast a common discovery signal on a single frequency common discovery channel. For example, a plurality of distributed discovery nodes (e.g., multiple of network access nodes **210-230**) may coordinate to exchange discovery information and consolidate discovery information and/or receive consolidated discovery information from a central coordinating point (e.g., a server or core network node that consolidates discovery information). The plurality distributed discovery nodes may then generate the same common discovery signal and then transmit the same common discovery signal in a synchronized fashion on the singe frequency common discovery channel, thus forming a single frequency network that carries the common discovery signal. In some aspects, this may require infrastructure coordination in order to consolidate information and/or maintain synchronized transmission. Single frequency common discovery channel broadcast in this manner may increase the coverage area and provide a common discovery signal across a large area.

In some aspects, distributed discovery nodes (including cases where multiple centralized discovery nodes act as distributed discovery nodes to share the same common discovery channel(s)) may utilize a minimum periodicity (and optionally also maximum periodicity) for discovery signal broadcast on the common discovery channel. Maximum channel access times may also be employed with required back-off times in which a distributed network access node may be required to wait for a predefined duration of time following a discovery signal broadcast to perform another discovery signal broadcast. Such techniques may ensure fairness by preventing distributed discovery nodes from overusing the common discovery channel by broadcasting discovery signals too frequently.

It is desirable that the discovery signal format be particularly robust for distributed discovery architectures due to the high potential for collisions (although such robustness may be beneficial in both centralized and distributed discovery architectures). Accordingly, it is desirable that the discovery signals be well-suited for low-sensitivity detection and decoding in addition to fast and accurate acquisition procedures. The requirements may however be less stringent than conventional cellular cases (e.g., LTE, UMTS, and GSM) signal reception due to the associated modality. In other words, only a deterministic amount of data may be included in the discovery signals and may be able to utilize a predefined bandwidth and rate. Such may enable design of low-power receiver circuitry at common discovery module **306e**, which may offer further benefits.

As noted above, there may exist multiple centralized discovery nodes in centralized discovery architectures that each assume discovery broadcast responsibilities for other network access nodes. Accordingly, such scenarios may be treated as a mix between centralized and distributed discovery architectures where potential collisions may occur between discovery signal broadcasts. Centralized discovery nodes may consequently also employ similar access techniques as noted above, such as access rules and active sensing, in order to minimize the impact of such potential collisions.

In some aspects of centralized and distributed discovery architectures, terminal devices receiving discovery signals on the common discovery channel may perform error control in order to ensure that information transmitted on the common discovery channel is correct. For example, if there is incorrect information on the common discovery channel (for example, if a distributed discovery node broadcasts discovery information on the common discovery channel that is incorrect or misdirected), reception of such information by a terminal device may result in terminal resources being wasted to read the incorrect information and potentially to act on it by pursuing subsequent communication operations under false assumptions. In the case that a terminal device attempts to establish a connection with a false network access node, such may unavoidably result in a waste of terminal resources. However, these scenarios may not be a fatal error (e.g., may not lead to a total loss of connectivity or harm to the terminal device or network).

In the event of incorrect discovery information provided on the common discovery channel, there may instead exist several remedial options available to both terminal devices and network access nodes. Specifically, a terminal device that has identified incorrect discovery information (via a failed connection or inability to detect a network access node based on discovery information provided on the common discovery channel) may notify a network access node that the terminal device is connected to (potentially after an initial failure) that there is incorrect information being broadcasted on the common discovery channel.

The notified network access node may then report the incorrect information, e.g., via a backhaul link, to an appropriate destination in order to enable the erroneous discovery information to be fixed. For example, the notified network access node may utilize a connection via a backhaul link (if such exists depending on the network architecture) to the offending network access node that is broadcasting the incorrect discovery information to inform the offending network access node incorrect discovery information, in response to which the offending network access node may correct the incorrect discovery information. Alternatively, if the discovery information is handled in a database e.g., as in the case of external database **800** of FIG. **8**, the notified network access node may inform the external database (via a backhaul link) of the incorrect discovery information, which may prompt the external database to correct the incorrect discovery information. The discovery information may thus be self-maintained, or 'self-policed', in order to ensure that the discovery information is correct.

In some aspects, centralized and distributed discovery architectures may enable terminal devices to employ a common discovery module to handle discovery responsibilities for multiple radio access technologies. As detailed above, such may significantly reduce the power penalty for discovery procedures and may further simplify discovery procedures due to the presence of only a single (or a limited number) of common discovery channels. In some aspects, the common discovery channel scheme may use cooperation of network access nodes in accordance with a centralized and/or distributed discovery architecture, which may coordinate with one another in order to consolidate discovery broadcast responsibilities at single network access nodes (in the case of centralized network architectures) and/or cooperate with one another to minimize the impact of collisions (in the case of distributed network architectures).

Continuing with the setting of FIG. **8** related to a centralized discovery architecture, in some aspects terminal devices may additionally utilize external database **800** in a more active role. For example, terminal devices that currently have a RAT connection providing access to external database **800** may query external database **800** for information related to nearby radio access networks and network access nodes. For example, in an exemplary configuration where external database **800** is provided as an external service in an Internet-accessible network location (e.g., as an internet cloud server), terminal devices that have active Internet connections (e.g., provided via a RAT connection) may exchange data with external database **800** in order to obtain discovery information for relevant network access nodes from external database **800**.

FIG. **9** shows an exemplary scenario in which terminal device **200** has a RAT connection with network access node **210** in accordance with some aspects. As shown in FIG. **9**, network access node **210** may also interface with external database **800** via backhaul interface **612**. Terminal device **200** may utilize the RAT connection with network access node **210** in order to exchange network access node information with external database **800**.

Specifically, external database **800** may be located in an Internet-accessible network location and may accordingly have a network address such as an Internet Protocol (IP) address, thus enabling Internet-connected devices to exchange data with external database **800**. Accordingly, terminal devices such as terminal device **200** may utilize RAT connections that provide Internet access (e.g., many cellular RAT connections and short-range RAT connections) in order to exchange network access node information with external database **800**. For example, terminal device **200** may utilize a RAT connection with network access node **210** (e.g., post-discovery) in order to access external database **800** and request information for network access nodes of interest.

Terminal device **200** may utilize external database **800** to obtain information for other network access nodes (including, for example, discovery information) of interest and may apply such information obtained from external database **800** in order to influence radio access communications with such network access nodes.

For example, in the exemplary scenario of FIG. **2** in which network access nodes **212-230** are proximate to network access node **110**, controller **308** of terminal device **200** may query external database **800** (via the first RAT connection with network access node **210** supported by first communication module **306a**) for information on proximate network access nodes. In response, external database **800** may provide controller **308** (via the first RAT connection with network access node **210** supported by first communication module **306a**) with information on network access node **212** and network access nodes **214-230**. Such information may include discovery information, which controller **308** may receive and utilize to direct future radio access communications.

For instance, based on discovery information provided by external database **800,** controller **308** may identify that network access node **216** is within range of terminal device **200** (e.g., by comparing a current geographical location of terminal device **200** with a geographic location of network access node **216** provided by external database **800** as part of the discovery information). Controller **308** may then utilize the discovery information to connect to and establish a RAT connection with network access node **216**. Accordingly, controller **308** may generally perform any unilateral radio interactions (e.g., performing radio measurements on a discovered network access node, receiving broadcast information of a discovered network access node) or bilateral radio interactions (e.g., pursuing and potentially establishing a bidirectional connection with a discovered network access node) with network access nodes based on the network access node information provided by external database **800**.

In some aspects, external database **800** may obtain the network access node information via any number of different sources, including via connections with network access nodes (which may additionally obtain discovery information as detailed herein) and/or via interfacing with radio access network databases. Terminal devices may be able to request any type of network access node information from external database **800** during any time that the terminal devices have a RAT connection that provides Internet access. Such information may be particularly useful to terminal devices either during start-up procedures or during time periods when link quality is poor.

For example, during start-up and/or initial RAT connection establishment, terminal device **200** may seek to establish an initial RAT connection quickly (e.g., potentially without giving full-consideration to establishing the optimal RAT connection in terms of radio link strength and quality) with an Internet-connected network access node and, using the established RAT connection, may query external database **800** for information on other network access nodes such as, for example, discovery information. Terminal device **200** may then receive the requested network access node information from external database **800** via the RAT connection.

Upon obtaining the network access node information, terminal device **200** may be able to identify one or more other network access nodes and may utilize the network access node information to select a more suitable network access node to switch to (such as, for example, by utilizing discovery information provided by external database **800** to perform radio measurements in order to identify a more suitable network access node). Alternatively, in scenarios where a current RAT connection degrades, terminal device **200** may query external database **800** for information on proximate network access nodes, which may enable terminal device **200** to select a new network access node to connect to that may provide a better RAT connection.

Regardless of the particular scenario, in some aspects terminal devices such as terminal device **200** may utilize external database **800** to obtain information on network access nodes of interest and may potentially utilize such information (including, for example, discovery information) to perform unilateral or bilateral radio interactions with one or more of the network access nodes.

External database **800** may therefore receive queries for network access node information from one or more terminal devices, where the terminal devices may transmit the queries via a radio access network to external database **800** using network addressing protocols (e.g., Internet Protocol (IP) addressing, Media Access Control (MAC) addressing, etc.). External database **800** may respond to such queries by then providing the requested information back to the terminal devices via the reverse of the same link. Accordingly, external database **800** may individually respond to each query using network addressing protocols.

Alternatively, in some aspects external database **800** may collect a number of different requests from multiple terminal devices and distribute the requested information via a multicast or broadcast mode. Accordingly, external database **800** may be configured to provide the requested information via either the same link used by the counterpart terminal devices to query for information or by a multicast or broadcast channel. For example, external database **800** may provide the requested information in multicast or broadcast format on a common discovery channel as detailed above. Terminal devices may therefore either utilize a common discovery module such as common discovery module **306e** or a dedicated radio access communication module (e.g., any of communication modules **306a-306d** depending on which radio access technology was employed to query the information from external database **800**).

In some aspects, the use of external database **800** in conjunction with a centralized discovery node architecture may also be expanded to provide information to network access nodes, such as, for example, to provide network access nodes with important information regarding other network access nodes. For example, Wi-Fi access points may be required to have radio sensing capabilities in order to ensure that their transmissions do not interfere with other transmitters using the same unlicensed spectrum. For example, Wi-Fi access points may be able to detect the presence of nearby radar transmitters, which may see governmental or defense usage and thus may be given a high priority in terms of avoiding interference (e.g., by a regulatory body such as the Federal Communications Commission (FCC)). As there may exist multiple different types of radar signals that may not all be detectable at a given geographic location, it may be relatively complex for Wi-Fi access points to perform comprehensive radar sensing.

In order to alleviate such issues, in some aspects, Wi-Fi access points may utilize external database **800** as a database to maintain information regarding radar signals. Accordingly, Wi-Fi access points may report detected radar signals to external database **800**, which may through the use of a centralized discovery node broadcast such information in order to allow other Wi-Fi access points to be aware of nearby radar transmitters. Wi-Fi access points may thus be configured with reception components in order to receive such information on a common discovery channel and may consequently rely on such information instead of having to perform complete radar sensing functions.

Discovery signals that are broadcasted based on information provided by external database **800** may therefore in some cases not be limited only to reception and usage by terminal devices. Accordingly, in some aspects network access nodes may also utilize such information in particular for interference management purposes. For example, any number of different types of network access nodes may receive and apply such discovery signals in order to be aware of the presence of other network access nodes and subsequently apply interference management techniques in order to reduce interference.

Although detailed above and depicted as a single database, in some aspects multiple instances of external database **800** may be deployed where each instance may contain the same or different information, such as, for example, a different external database to serve certain geographic regions.

In some aspects, the techniques detailed above regarding the common discovery channel may also be expanded to device-to-device communications, where one or more terminal devices may utilize the common discovery channel to broadcast discovery information locally available at each mobile terminal. For example, controller **308** may previously have obtained discovery information for one or more network access nodes, for example, either via conventional discovery at one of communication modules **306a-306d** or reception of discovery information on a common discovery channel via common discovery module **306e**.

In order to simplify discovery procedures for other proximate terminal devices, controller **308** may then transmit the obtained discovery information as a discovery signal (e.g., by generating the discovery signal according to a predefined format) on a common discovery channel, for example, by using transmission components included in common discovery module **306e** (in which case common discovery module **306e** may be more than a simple low-complexity receiver) or another communication module configured to transmit discovery signals on the common discovery channel. Accordingly, other terminal devices may thus receive the discovery signal on the common discovery channel and utilize the discovery information contained therein to perform unilateral or bilateral radio interactions with the network access nodes represented in the discovery information.

In some aspects, such device-to-device operation of the common discovery channel may function similarly to distributed discovery architectures at detailed above, where each transmitting terminal device may operate as a distributed discovery node in order to broadcast discovery signals on the common discovery channel.

FIG. **10** shows a method **1000** of performing radio communications in accordance with some aspects. The method **1000** includes decoding discovery information for a first radio access technology and a second radio access technology from a common discovery channel (**1010**), wherein the discovery information is encoded into one or more discovery signals according to a common discovery signal format, and controlling one or more RAT connections of different radio access technologies according to the discovery information (**1020**). In one or more further exemplary aspects of the disclosure, one or more of the features described above in reference to FIGS. **1-9** may be further incorporated into method **1000.** In particular, method **1000** may be configured to perform further and/or alternate processes as detailed regarding terminal device **200**.

1.2 Common Channel #2

In some aspects of this disclosure, terminal devices may coordinate with network access nodes to use a common control channel that provides control information for multiple radio access technologies. Accordingly, instead of monitoring a separate control channel for multiple radio access technologies, a terminal device may consolidate monitoring of the separate control channels into monitoring of a common control channel that contains control information for multiple radio access technologies.

In some aspects, terminal devices may also receive control information that instructs the terminal devices how and when to transmit and receive data over wireless access network. Such control information may include, for example, time and frequency scheduling information, coding/modulation schemes, power control information, paging information, retransmission information, connection/mobility information. Upon receipt of this information, terminal devices may transmit and receive radio data according to the specified control parameters in order to ensure proper reception at both the terminal device and on the network side at the counterpart network access node.

A RAT connection may rely on such control information. For example, as previously detailed regarding FIG. **3**, controller **308** may maintain a separate RAT connection via two or more of communication modules **306a-306d** (although in many scenarios the cellular connections for each of communication modules **306a-306c** may be jointly managed, for example, in a master/slave RAT scheme). Accordingly, controller **308** may receive control information for the first RAT to maintain a first RAT connection via first communication module **306a** (e.g., LTE control information to maintain an LTE connection in an exemplary LTE setting) while also receiving control information for the second RAT to maintain a second RAT connection via second communication module **306c** (e.g., Wi-Fi control information to maintain a Wi-Fi connection in an exemplary Wi-Fi setting). Controller **308** may then manage the first and second RAT connections according to the respective control information and corresponding radio access protocols.

Even if one of the RAT connections is idle, for example, not actively exchanging user data traffic, controller **308** may still monitor that one of the RAT connections, in particular for control information such as, for example, paging messages.

For example, even if the first RAT connection at first communication module **306a** is in an idle state, (e.g., camped on an LTE cell but not allocated any dedicated resources in an exemplary LTE setting), controller **308** may still monitor the first RAT connection via first communication module **306a** in case a network access node of the first RAT (e.g., an LTE cell) transmits a paging message to first communication module **306a** that indicates incoming data for first communication module **306a**. Accordingly, controller 308 may continuously monitor first radio access LTE connection for incoming first RAT data with first communication module **306a**.

Similarly, regardless of whether a second RAT connection at second communication module **306b** is idle, controller **308** may also continuously monitor the second RAT connection for incoming second RAT data with second communication module **306b** (and likewise for any other RAT connections, e.g., at communication modules **306c-306d**). This may cause excessive power consumption at communication modules **306a-306d** due to constant monitoring for control information.

It may therefore be advantageous to consolidate monitoring for multiple RAT connections into a single RAT connection, such as, for example, by being able to monitor a single RAT connection for control information of multiple RATs. For example, terminal device **200** may be able to monitor for Wi-Fi beacons and data (including e.g., beacon frames to indicate pending data for Wi-Fi devices currently using power-saving mode, which may prompt wakeup to receive the data) and other Wi-Fi control information of a Wi-Fi connection over an LTE connection. This may involve network-level forwarding of incoming data for one RAT connection to another RAT connection (e.g., forwarding Wi-Fi data via an LTE connection), which may enable terminal device **200** to monitor one RAT connection in place of multiple RAT connections. For example, terminal device **200** may be able to receive incoming Wi-Fi data with first communication module **306a**, which may allow terminal device **200** to avoid continuously monitoring the Wi-Fi connection with second communication module **306b**.

These aspects may therefore enable controller **308** to utilize a forwarding and common monitoring scheme where the monitoring of incoming data for multiple of communication modules **306a-306d** is consolidated onto a single RAT connection. In the example described above, controller **308** may therefore only monitor the first RAT connection with first communication module **306a**. As incoming second RAT data will be forwarded to the first RAT connection, e.g., forwarded to the network access node counterpart to terminal device **200** for the first RAT connection, controller **308** may receive such incoming second RAT data at first communication module **306a**.

Controller **308** may proceed to identify the incoming data for the second RAT, such as, for example, a paging message for the second RAT connection at second communication module **306b**, and proceed to control the second RAT connection according to the incoming second RAT data. For example, after receiving data on the first RAT connection, first communication module **306a** may provide received data (which may include the incoming second RAT data embedded in first RAT data) to controller **308**, which may identify the incoming second RAT data. In the case where the incoming second RAT data is e.g., a second RAT paging message, controller **308** may activate second communication module **306b** and proceed to receive the incoming second RAT data indicated in the second RAT paging message. Analogous consolidation of monitoring for multiple RAT connections may likewise be realized with any other combination of two or more RAT connections. For example, in an exemplary LTE and Wi-Fi setting where the first RAT is LTE and the second RAT is Wi-Fi, controller **308** may receive Wi-Fi control data via first communication module **306a** (where the Wi-Fi data was forwarded to the LTE connection at the network-level). Controller **308** may then control the Wi-Fi connection via second communication module **306b** based on the Wi-Fi control data.

The forwarding and common monitoring system may rely on cooperation from at least one of the counterpart network access nodes. For example, in the above example the second RAT network access node may identify incoming data addressed to terminal device **200** and forward the identified data to the first RAT network access node for subsequent transmission to terminal device **200** over the first RAT connection. Accordingly, the forwarding and common monitoring system may rely on a forwarding scheme in which second RAT data at the second RAT network access node intended for terminal device **200** is forwarded to the first RAT network access node, thus enabling the first RAT network access node to subsequently transmit the second RAT data over the first RAT connection to first communication module **306a**.

Although, in certain scenarios, both the first RAT network access node and the second RAT access node may be configured according to the forwarding and common monitoring scheme, the forwarding and common monitoring scheme may be implemented with only a single cooperating network access node that forwards data to the terminal device via a non-cooperating network access node.

FIG. **11** illustrates an exemplary forwarding and common monitoring system in accordance with some aspects. In FIG. **11,** second RAT data intended for terminal device **200** is re-routed, or forwarded, from a second RAT connection to a first RAT connection, thus enabling terminal device **200** to forego monitoring of the second RAT connection and instead only monitor the first RAT connection. While some examples in the following description may focus on LTE and Wi-Fi, terminal device **200** may analogously apply the same forwarding and common monitoring technique for any two or more radio access technologies.

In scenario **1100** shown in FIG. **11**, terminal device **200** may have a first RAT connection and a second RAT connection via first communication module **306a** and second communication module **306d**, respectively. As shown in **1100**, terminal device **200** may have a second RAT connection supplied by network access node **1106** that provides terminal device **200** with a connection to internet network **1102**. Terminal device **200** may also have a first RAT connection supplied by network access node **1108** that routes through core network **1104** to internet network **1102**.

In some aspects, as the first RAT connection and the second RAT connections are separate, terminal device **200** may be assigned a network address for each connection. For example, terminal device **200** may have a network address of e.g., *a.b.c.d* for the second RAT connection (that identifies terminal device **200** as an end-destination of the second RAT connection) and a network address of e.g., *e.f.g.h* for the first RAT connection (that identifies terminal device **200** as an end-destination of the first RAT connection). Data packets (such as IP data) may be routed along the first and second RAT connections from internet network **1102** to terminal device **200** according to the first and second RAT network addresses. In some aspects, the network addresses may be IP addresses. In some aspects, the network addresses may be MAC addresses. Other network addressing protocols may also be used without departing from the scope of this disclosure. In some aspects, terminal device **200** can be associated with one or more network addresses, where networks may use the one or more addresses to route data to terminal device **200**. The one or more network addresses can be any type of address that is compliant with the underlying network.

Controller **308** may therefore maintain both the first and second RAT connections with first communication module **306a** and second communication module **306b** in order to exchange user data traffic with internet network **1102**. If a RAT connection is in an active state, controller **308** may constantly operate the corresponding communication module in order to exchange uplink and downlink data with the appropriate network access node. Alternatively, if a RAT connection is in an idle state, controller **308** may only periodically operate the corresponding communication module to receive infrequent control data such as paging messages, which may indicate that an idle connection may be transitioned to an active state in order to receive incoming data.

If a paging message is received for a given idle RAT connection, controller **308** may subsequently activate the corresponding communication module in order to transition the corresponding RAT connection to an active state to receive the incoming data indicated in the paging message. Accordingly, such paging message monitoring may require that controller **308** monitor both first communication module **306a** and second communication module **306b** even when the underlying RAT connections are in an idle state. This may require high battery power expenditure at terminal device **200**.

In some aspects, in order to avoid having to monitor two or more RAT connections separately, controller **308** may execute the forwarding and common monitoring mechanism illustrated in FIG. **11**. This temporarily disconnects one of the RAT connections and arranges for incoming data for the disconnected RAT connection to be forwarded to another RAT connection. Controller **308** may then monitor for data of the disconnected RAT connection on the remaining RAT connection.

For example, in a scenario where the second RAT connection with network access node **1106** is in an idle state and the first RAT connection with network access node **1108** is in either an active or idle state, controller **308** may temporarily disconnect the second RAT connection and transfer monitoring of the second RAT connection from second communication module **306b** to first communication module **306a**. Controller **308** may therefore place second communication module **306b** in an inactive state, which may conserve battery power.

In some aspects, in order to disconnect a RAT connection (e.g., the second RAT connection), controller **308** may set up a forwarding path in order to ensure that data intended for terminal device **200** on the disconnected RAT connection, such as e.g., paging messages and other control data, is re-routed to another RAT connection (e.g., through network access node **1108**).

Accordingly, as shown in scenario **1100**, controller **308** may transmit a forwarding setup instruction to network access node **1106** (via second communication module **306b** over the second RAT connection) that instructs network access node **1106** to temporarily disconnect the second RAT connection and to re-route second RAT data intended for terminal device **200** to an alternate destination. For example, controller **308** may instruct network access node **1106** to forward all second RAT data intended for the second RAT network address *a.b.c.d* of terminal device **200** to the first RAT network address *e.f.g.h* of terminal device **200**. Upon receipt of the forwarding setup instruction network access node **1106** may register the alternate destination of terminal device **200**, e.g., first RAT network address *e.f.g.h* in a forward table (as shown in FIG. **11**), and thus activate forwarding to the alternate destination.

FIG. **12** shows an internal configuration of network access node **1106** in accordance with some aspects. Network access node **1106** may include antenna system **1202**, radio system **1204**, communication system **1206** (including control module **1208** and forwarding table **1112**), and/or backhaul interface **1212**. Network access node **1106** may transmit and receive radio signals via antenna system **1202**, which may be an antenna array including multiple antennas. Radio system **1204** may perform transmit and receive RF and PHY processing in order to convert outgoing digital data from communication module **1206** into analog RF signals to provide to antenna system **1202** for radio transmission and to convert incoming analog RF signals received from antenna system **1202** into digital data to provide to communication module **1206**. Control module **1208** may control the communication functionality of network access node **1106** according to the corresponding radio access protocols, e.g., Wi-Fi/WLAN, which may include exercising control over antenna system **1202** and radio system **1204**.

Radio system **1204**, control module **1208** may be structurally realized as hardware-defined modules, e.g., as one or more dedicated hardware circuits or FPGAs, as software-defined modules, e.g., as one or more processors executing program code that define arithmetic, control, and I/O instructions (e.g., software and/or firmware) stored in a non-transitory computer-readable storage medium, or as mixed hardware-defined and software-defined modules.

In some aspects, forwarding table **1112** may be embodied as a memory that is accessible (read/write) by control module **1208**. Backhaul interface **1212** may be a wired (e.g., Ethernet, fiber optic, etc.) or wireless (e.g., microwave radio or similar wireless transceiver system) connection point for physical connection configured to transmit and receive data with other network nodes, which may be e.g., a microwave radio transmitter, or a connection point and associated circuitry for a fiber backhaul link.

In some aspects, control module **1208** may receive forwarding setup instructions (following processing by antenna system **1202** and radio system **1204**) as illustrated in **1100** and proceed to activate forwarding for terminal device **200** by updating forwarding table **1112** according to the alternate destination, e.g., first RAT network address *e.f.g.h* as provided by controller **308** in the forwarding setup instructions.

Following forwarding activation, network access node **1106** may re-route all second RAT data received from internet network **1102** that is intended for terminal device **200** (e.g., addressed to second RAT network address *a.b.c.d*) to the alternate destination, e.g., first RAT network address *e.f.g.h.* As the alternate destination is merely the first RAT network address of the first RAT connection of terminal device **200**, such may as a result re-route the second RAT data to terminal device **200** via the first RAT network address. Accordingly, terminal device **200** may receive the second RAT data over the first RAT connection at first communication module **306a** along with other data addressed to first RAT network address *e. f. g. h.*

In some aspects, control module **1208** may populate forwarding table **1112** using forwarding setup instructions received from served terminal devices. Forwarding table **1112** may contain forwarding entries including at least an original network address and a forwarding network address. In some aspects, control module **1208** may register, in forwarding table **1112,** the original network address (e.g., *a. b. c. d* for terminal device **200)** of the terminal devices with the forwarding network address specified in the forwarding setup instruction (e.g., *e. f. g. h* for terminal device **200).** Accordingly, upon receipt of the forwarding setup instruction from terminal device **200** (where terminal device **200** has second RAT network address *a. b. c. d* and specifies forwarding network address *e. f. g. h* in the forwarding setup instruction), control module **1208** may register the original second RAT network address *a. b. c. d* and forwarding network address *e. f. g. h* at forwarding table **1112.** In some cases, control module **1208** may also set an ‘active flag’ for the forwarding entry of terminal device **200** to ’on’, where the active flag for a forwarding entry may specify whether the forwarding path is currently active.

In some aspects, after receiving the forwarding setup instruction from terminal device **200** at **1100,** control module **1208** may proceed to forward all incoming data intended for terminal device **200** at second RAT network address *a. b. c. d* to first RAT network address *e. f. g. h.* FIG. **11** shows the high-level forwarding path via internet network **1102,** core network **1104,** and network access node **1108** while FIG. **12** shows the internal path within network access node **1106** in accordance with some aspects. As depicted in **1110,** internet network **1102** may provide data packets to network access node **1106,** which may be addressed to various terminal devices that are served by network access node **1106.** Network access node **1106** may receive such data packets at backhaul interface **1212,** which may route incoming data packets to control module **1208.** Control module **1208** may check the destination network address of each data packet with the original network addresses in forwarding table **1112** as shown in FIG. **12** in order to determine whether any data packets should be re-routed to a forwarding network address.

Accordingly, as shown in **1110,** network access node **1106** may receive a data packet (or a stream of data packets where the following description may likewise apply for multiple data packets) from internet network **1102** that are addressed to destination network address *a. b. c. d.* Network access node **1106** may receive such data packets from internet network **1102** via backhaul interface **1212,** where data packets may subsequently be received and processed at control module **1208.**

Subsequently, control module **1208** may then, for each data packet addressed to a served terminal device, check whether the destination network address matches with an original network address registered in forwarding table **1112** with an active forwarding flag. If a data packet is addressed to an original network address with an active flag in forwarding table **1112,** control module **1208** may forward the data packet to the forwarding network address registered with the original network address in forwarding table **1112.**

Accordingly, as shown in FIG. **12,** upon receipt of a data packet addressed to terminal device **200** (e.g., at network address *a. b. c. d*)*,* control module **1208** may compare the destination network address of *a. b. c. d* to the forwarding entries of forwarding table **1112** and determine that destination network address *a. b. c. d* matches with original network address *a. b. c. d* for terminal device **200** and has an active forwarding flag. Consequently, instead of transmitting the data packet to terminal device **200** via the second RAT connection (provided from radio system **1204** and antenna system **1202** to second communication module **306b),** control module **1208** may re-route the data packet to the forwarding network address of terminal device **200** registered to original network address *a. b. c. d* in forwarding table **1112,** e.g., to forwarding network address *e. f. g. h* which may be the first RAT network address registered by terminal device **200** in the initial forwarding setup message.

Upon identifying the appropriate forwarding network address for the data packet, control module **1208** may re-address the data packet (e.g., depending on the corresponding header encapsulation and transmission protocols, e.g., according to a IP addressing scheme) and transmit the re-addressed data packet to internet network **1102** via backhaul interface **1212.** Since the data packet is re-addressed to the forwarding network address *a. b. c. d,* internet network **1102** may route the re-addressed data packet to core network **1104.**

In some aspects, core network **1104** may similarly utilize the forwarding network address *a. b. c. d* to route the re-addressed data packet to the appropriate network access node associated with the forwarding network address of *e. f. g. h,* for example, to network access node **1108** that is providing a first RAT connection to terminal device **200** with first RAT network address *e. f. g. h* as the user-side destination address.

Network access node **1108** may then transmit the re-addressed data packet to terminal device **200** using the first RAT connection, where terminal device **200** may receive the re-addressed data packet at first communication module **306a** and subsequently process the re-addressed data packet at controller **308.** Accordingly, controller **308** may not actively operate second communication module **306b** to receive the data packet. Instead, controller **308** may consolidate monitoring for both the first and second RAT connections at only first communication module **306a.** Controller **308** may identify that the re-addressed data packet is a second RAT data packet and may process the re-addressed data packet according to the associated second RAT protocols as if the data packet had actually been received at second communication module **306b**.

As previously indicated, the data packet may be control data, such as a paging message, that indicates incoming second RAT data addressed to terminal device **200.** Upon recognition that the data packet is a second RAT paging message, controller **308** may activate second communication module **306b** and proceed to activate and control second communication module **306b** in order to receive the incoming second RAT data over the second RAT connection.

In order to receive the incoming second RAT data over the second RAT connection, controller **308** may de-activate forwarding at network access node **1106.** Accordingly, controller **308** may resume the second RAT connection at second communication module **306b** with network access node **1106** and transmit a forwarding deactivation instruction to network access node **1106.** In some aspects, network access node **1106** and controller **308** may maintain the second RAT connection 'virtually' during forwarding, such as by keeping the network addresses and ignoring any keep-alive timers (which may otherwise expire and trigger complete tear-down of the connection). Accordingly, once controller **308f** decides to de-activate forwarding and utilize the second RAT connection again, second communication module **306b** and network access node **1106** may resume using the second RAT connection without performing a full connection re-establishment procedure. For example, controller **308** may transmit a request (via the forwarding link) to network access node **1106** to resume using the second RAT connection. Network access node **1106** may then respond with an acknowledgement (ACK) (via the forwarding link), which may prompt control module **1208** to resume using the second RAT connection with second communication module **306d.** In some aspects, controller **308** may expect that network access node **1106** is configured to continue monitoring the second RAT connection and may resume transmitting on the second RAT connection via second communication module **306b**. Alternatively, in some aspects network access node **1106** and controller **308** may terminate (e.g., completely tear-down) the second RAT connection during forwarding, and may re-establish the second RAT connection, such as by performing e.g., via discovery and initial connection establishment.

In some aspects, control module **1208** may receive the forwarding deactivation instruction (via antenna system **1202** and radio system **1204)** and proceed to de-activate the forwarding link. In some cases, control module **1208** may de-activate the forwarding link by changing the active flag in forwarding table **1112** for terminal device **200** to 'off control module **1208** may alternatively delete the forwarding entry from forwarding table **1112**). Consequently, upon receipt of further data packets addressed to terminal device at *a. b. c. d,* control module **1208** may determine from forwarding table **1112** that no forwarding link is currently active for the destination network address *a. b. c. d* and may proceed to wirelessly transmit the data packets to terminal device **200** over the second RAT connection. Terminal device **200** may therefore receive the incoming second RAT data indicated in the initially-forwarded paging message over the second RAT connection at second communication module **306b**.

As indicated above, in some aspects network access node **1106** may implement the forwarding link by re-addressing data packets that are initially addressed to the second RAT network address of terminal device **200** to be addressed to the first RAT network address. In some aspects, network access node **1106** may implement the forwarding link for a given data packet by wrapping the data packet with another wrapper (or header) that contains the first RAT network address of terminal device **200** (e.g., the forwarding network address). Network access node **1106** may then send the re-wrapped data packet to internet network **1102,** which may then route the re-wrapped data packet to core network **1104** and network access node **1108** according to the wrapper specifying the first RAT network address of terminal device **200.** Network access node **1108** may then complete the forwarding link by transmitting the re-wrapped data packet to terminal device **200** over the first RAT connection.

FIG. **13** outlines the forwarding and common monitoring scheme as method **1300** executed at terminal device **200** in accordance with some aspects. As shown in FIG. **13,** controller **308** may first select a connection to temporarily deactivate, for example, the second RAT connection via network access node **1106,** and may establish a forwarding link for all incoming data on the deactivated RAT connection in **1302.** In particular, controller **308** may transmit a forwarding setup instruction to the network access node originally supporting the selected RAT connection, e.g., the 'original network access node', that specifies a forwarding network address for the original network access node to forward all future incoming data addressed to terminal device **200.** Controller **308** may then deactivate the selected RAT connection, which may include deactivating associated communication components, e.g., second communication module **306b,** which controller **308** may place in an idle, sleep, or power-off state in order to conserve power.

In some aspects, in **1304,** controller **308** may then proceed to transmit and/or receive data over the remaining RAT connections including the RAT connection associated with the forwarding link, e.g., the first RAT connection with network access node **1108.** Accordingly, as opposed to executing communications over the deactivated RAT connection, controller **308** may keep the communication components associated with the deactivated RAT connection in an inactive state and instead monitor for associated incoming data on the forwarding link. The original network access node may proceed to forward all incoming data addressed to terminal device **200** at the original network address to the forwarding network address specified by controller **308** in the forwarding setup instruction, which may be a network address of a remaining RAT connection of terminal device **200** that is provided by another network access node, e.g., the 'selected network access node'.

Controller **308** may thus examine data received from the selected network access node on the forwarding link in **1306** to determine whether incoming data is intended for the RAT connection associated with the forwarding link or has been forwarded after initially being addressed to terminal device **200** over the deactivated RAT connection. If all incoming data on the forwarding link is originally associated with the RAT connection associated with the forwarding link, controller **308** may continue transmitting and receiving data on the remaining RAT connections in **1304.**

Alternatively, if controller **308** determines that forwarded data for the deactivated RAT connection was received on the forwarding link **1306,** controller **308** may read the forwarded data to identify the contents of the forwarded data and determine what further action is appropriate. More specifically, controller **308** may determine in **1308** whether controller **308** needs to re-establish the deactivated RAT connection in order to receive further incoming data on the currently deactivated RAT connection.

In some aspects, if the forwarded data identified in **1306** is the only incoming data for the deactivated RAT connection or if the forwarded data identified in **1306** indicates that only a limited amount of further incoming data is pending for the deactivated RAT connection (e.g., a paging message that only indicates a limited amount of further incoming data), in **1308,** controller **308** may decide that it is not necessary to re-establish the deactivated RAT connection and may proceed to receive any remaining forwarded data for the deactivated RAT connection from the selected network access node over the forwarding link in **1310.**

Alternatively, if controller **308** decides in **1308** that the deactivated RAT connection should be re-established (e.g., in the event that the forwarded data identified in **1306** indicates a significant amount of incoming data for the deactivated RAT connection) or if the forwarded data indicates that uplink data traffic is necessary, controller **308** may proceed to **1312** to re-establish deactivated RAT connection and deactivate the forwarding link.

More specifically, controller **308** may re-connect to the original network access node that initially provided the currently deactivated RAT connection (if the network access node is still available, as further detailed below) to re-establish the deactivated RAT connection and subsequently deactivate the forwarding link by transmitting a forwarding deactivation instruction to the original network access node on the now-re-established RAT connection. Such may include re-activating the communication components associated with the re-established RAT connection, e.g., second communication module **306b**. The original network access node may then deactivate the forwarding link by updating the forwarding table.

As the forwarding link is now deactivated, the original network access node may not forward incoming data addressed to terminal device **200** and may instead proceed to transmit the incoming data to terminal device **200** over the re-established RAT connection. Accordingly, controller **308** may receive the remaining data on the re-established RAT connection via the associated communication components in **1314.**

If necessary, following conclusion of reception of the remaining data in **1314,** controller **308** may in some aspects decide to establish a new forwarding link by transmitting a forwarding setup instruction to the original network access node (potentially routed through the selected network access node), thus once again deactivating the same RAT connection and allowing for deactivation of the associated communication components. Controller **308** may thus conserve power by deactivating the associated communication components and resuming the forwarding link via another RAT connection, e.g., by consolidating reception for multiple RAT connections into one.

While forwarding link activation as in **1302** may be completed via transmission of a forwarding setup instruction and subsequent registration by a network access node, re-establishment of previously deactivated RAT connections (and the associated forwarding link de-activation) as in **1312** may be complicated due to dynamic radio conditions and network mobility.

For example, while terminal device **200** may be within range of network access node **1106** in **1100** and **1110** (and thus capable of transmitting forwarding instructions to network access node **1106),** terminal device **200** may move to a different geographic location after forwarding has been activated by network access node **1106.** Additionally or alternatively, changing network and radio conditions may render network access node **1106** incapable of completing transmissions to terminal device **200** (or vice versa) even if terminal device **200** remains in the same geographic location.

Accordingly, in some cases controller **308** may not be able to re-establish the original RAT connection with network access node **1106.** As a result, controller **308** may not be able to deactivate the forwarding link and resume communication over the original RAT. Accordingly, network access node **1106** may continue forwarding data addressed to terminal device **200** according to the forwarding link as initially established by controller **308.**

If a RAT connection with the same radio access technology as the original RAT connection is desired, controller **308** may therefore discover a new network access node of the same radio access technology; for example, in the setting of FIG. **11** controller **308** may perform discovery for the second RAT in order to detect proximate network access nodes of the second RAT with which to establish a new RAT connection (e.g., to the same destination address in internet network **1102** using a new network access node).

Accordingly, controller **308** may trigger discovery at the appropriate communication module, e.g., second communication module **306b** (or alternatively using a common discovery channel and procedure as previously detailed regarding common discovery module **306e** in FIG. 3; such common discovery may equivalently be employed to discover network access nodes), in order to detect proximate network access nodes of the desired radio access technology. If the appropriate communication module, e.g., second communication module **306b,** discovers a suitable network access node, controller **308** may establish a RAT connection with the selected network access node and, via the selected network access node, may hand over the deactivated RAT connection from the original network access node, e.g., network access node **1106,** to the selected network access node, e.g., another network access node (not explicitly shown in FIG. **11).** As the original network access node is still operating a forwarding link according to the forwarding setup instruction initially provided by controller **308,** controller **308** may therefore utilize the selected network access node to route a forwarding deactivation instruction to the original network access node to instruct the original network access node to deactivate the forwarding link.

In the setting of FIG. **11,** controller **308** may address the forwarding deactivation instruction to network access node **1106;** consequently, the selected network access node may receive the forwarding deactivation instruction from controller **308** and route the forwarding deactivation instruction to the original network access node, e.g., via internet network **1102.**

As controller **308** also needs all future data to be routed to terminal device **200** via the selected network access node, controller **308** may also arrange a connection handover in order permanently transfer the deactivated RAT connection at the original network access node to the selected network access node, thus enabling controller **308** to continue with the newly established RAT connection at the selected network access node.

Controller **308** may eventually decide to re-establish a forwarding link while connected to the selected network access node, in which case controller **308** may transmit a forwarding setup instruction to the selected network access node with a forwarding address in the same manner as previously detailed and subsequently have data associated with the RAT connection with the selected network access node be forwarded to terminal device **200** via another network access node.

While controller **308** may successfully perform discovery in certain scenarios to detect proximate network access nodes of the same radio access technology as the deactivated RAT connection, there may be other cases in which controller **308** is unable to detect any suitable network access nodes, thus leaving the forwarding link active at the original network access node without any way to re-establish a RAT connection with the same radio access technology as the deactivated RAT connection. Accordingly, controller **308** may resort to other radio access technologies.

For example, controller **308** may utilize the remaining RAT connection on which the forwarding link is active, e.g., the first RAT connection via network access node **1108** in the setting of FIG. **11,** in order to deactivate the existing forwarding link at the original network access node, e.g., network access node **1106,** and transfer the deactivated RAT connection to the remaining RAT connection.

More specifically, in some aspects controller **308** may utilize the remaining RAT connection to route a forwarding deactivation instruction to the original network access node; for example, in the setting of FIG. **11,** controller **308** may utilize the first RAT connection with network access node **1108** to route a forwarding deactivation instruction to network access node **1106** via core network **1104** and internet network **1102.** Network access node **1106** may thus receive the forwarding deactivation instruction and proceed to deactivate the forwarding link (e.g., via update of forwarding table **1112),** thus terminating forwarding of data addressed to terminal device **200** to the forwarding network address originally specified by controller **308** in the initial forwarding setup instruction.

Controller **308** may also arrange transfer of the deactivated RAT connection at network access node **1106** to network access node **1108,** thus ensuring that terminal device **200** continues to receive the associated data via the remaining RAT connection. As the second RAT connection is now broken, terminal device **200** may forfeit the second RAT network address and instead rely on the first RAT connection and associated first RAT network address for data transfer.

The forwarding and common monitoring scheme detailed above may not be limited to receipt of paging messages and may be particularly well-suited for forwarding and common monitoring for any sporadic and/or periodic information. Control information may thus be particularly relevant, in particular idle mode control information such as paging messages that occur relatively infrequently. However, the forwarding and common monitoring scheme may be equivalently applied for any data and/or data stream. For example, the re-addressed data packet detailed above may contain a second RAT paging message that indicates that only a small amount of incoming second data is pending transmission to terminal device **200.** Accordingly, instead of re-activating the second RAT connection at second communication module **306b** and deactivating the forwarding link with a forwarding deactivation instruction, controller **308** may instead leave the forwarding link untouched (e.g., refrain from transmitting a forwarding deactivation instruction) and thus allow network access node **1106** to continue to forward data packets to terminal device **200** by re-addressing the data packets with the forwarding network address *e. f. g. h* and routing the re-addressed data packets to terminal device **200** via internet network **1102,** core network **1104,** and network access node **1108** (e.g., the forwarding link). While excessive extraneous data traffic on the first RAT connection between network access node **1108** and terminal device **200** may lead to congestion, forwarding of reasonable amounts of data to terminal device **200** via the forwarding link may be acceptable. Accordingly, terminal device **200** may in some aspects avoid activating second communication module **306b** to receive the incoming data and may instead receive the second RAT data via the forwarding link from network access node **1108.**

Following reception of the incoming second RAT data via the forwarding link, terminal device **200** may continue to consolidate monitoring at first communication module **306a** by leaving the forwarding link intact at network access node **1106,** e.g., by refraining from transmitting a forwarding deactivation instruction. While it may be advantageous to avoid transmitting large amounts of data (such as a multimedia data stream or large files) over the forwarding link, terminal device **200** may implement forwarding for any type or size of data in the same manner as detailed above; accordingly, all such variations are within the scope of this disclosure.

Larger amounts of data such as for multimedia data streams or large files may also be manageable depending on the capacity and current traffic loads of the network access node selected to support the forwarding link; accordingly, high-capacity and/or low traffic network access nodes may be more suitable to handle larger amounts of forwarded data than other low-capacity and/or high traffic network access nodes.

The forwarding links detailed herein may be primarily utilized for downlink data; however, depending on the configuration of network access nodes, terminal device **200** can in some aspects transmit uplink data over the forwarding link. For example, if a forwarding link is active and controller **308** has uplink data to transmit on the idle RAT connection, controller **308** may decide whether to utilize the forwarding link to transmit the uplink data or to re-activate (or re-establish) the idle RAT connection. For example, if the uplink data is a limited amount of data (e.g., less than a threshold), controller **308** may transmit the uplink data via the forwarding link. If the uplink data is a larger amount of data (e.g., more than the threshold), controller **308** may re-activate (or re-establish) the idle RAT connection to transmit the uplink data. In some aspects, controller **308** may first transmit an access request message to the network access node of the idle RAT connection via the forwarding link to initiate re-establishment of the idle RAT connection.

In addition to forwarding setup and forwarding deactivation instructions, in some aspects terminal device **200** may additionally employ forwarding modification instructions. Terminal device **200** may employ such forwarding modification instructions in order to modify an existing forwarding link (either active or inactive). For example, terminal device **200** may be assigned a new first RAT network address, e.g., *q. r. s. t,* and may update the forwarding entry at network access node **1106** in order to ensure that future data packets are routed to the new first RAT network address. Controller **308** may therefore generate a forwarding modification instruction that identifies the new first RAT network address *q. r. s.* t.as the forwarding network address and transmit the forwarding modification instruction to network access node **1106** (via the second RAT connection with second communication module **306b).**

Control module **1208** may receive the forwarding modification instruction via backhaul interface **1212** and subsequently update the entry for terminal device **200** in forwarding table **1112** to replace the old forwarding network address (*e. f. g. h*) with the new forwarding network address (*q. r. s. t*). Such forwarding modification instructions may additionally be combined with forwarding setup or forwarding deactivation instructions by including an activation or deactivation instruction in the forwarding modification instruction that prompts control module **1208** to set the active forwarding flag in forwarding table **1112.**

The exemplary scenarios **1100** and **1110** detailed above may be employed for any type of radio access technology. For example, in some aspects the first RAT may be e.g., LTE and the second RAT may be e.g., Wi-Fi, where network access node **1108** may be an LTE eNodeB and network access node **1106** may be a Wi-Fi AP. In some aspects, the first RAT may be Wi-Fi and the second RAT may be LTE, where network access node **1108** may be a Wi-Fi AP and network access node **1106** may be an LTE eNodeB. In some aspects, the first or second RAT may be Wi-Fi and the other of the first or second RAT may be Bluetooth. Any radio access technology may be utilized without departing from the scope of this disclosure.

In various aspects, terminal device **200** may therefore rely on cooperation via various network access nodes in order to execute the forwarding and common monitoring scheme. In some aspects, the forwarding network access node (network access node **1106** or network access node **1108)** may implement the forwarding procedure without manipulation of the underlying radio access protocols. Such may rely on the fact that incoming data may be forwarded to the same destination device via another network address assigned to the destination device. In other words, the standardized protocols, e.g., Wi-Fi, LTE, etc., in the specific examples, may not be modified in order to support the forwarding scheme as only the local configuration of the network access node may be modified to include the forwarding structure.

As cooperation by the network access nodes may be important, the ability of terminal device **200** to implement the forwarding and common monitoring scheme may depend on whether the associated network access nodes support the forwarding system. Accordingly, if only one of network access node **1106** or network access node **1108** supports forwarding, in some aspects terminal device **200** may only be able to forward data traffic associated with the forwarding-capable network access node to the non-forwarding-capable network access node (and not vice versa). Regardless, only one of the network access nodes may be compatible in order to allow terminal device **200** to utilize the forwarding and common monitoring scheme.

However, if multiple network access nodes support forwarding, e.g., if both network access node **1106** and network access node **1108** support forwarding, terminal device **200** may be able to select which of the RAT connections to temporarily disconnect and which to support the forwarding link. As previously detailed, the forwarding and common monitoring scheme may offer power consumption advantages as terminal device **200** may be able to temporarily deactivate one or more communication modules and have all associated data packets forwarded to other active communication modules, thus consolidating incoming data packet monitoring to the active communication modules. Applications where terminal device **200** has active RAT connections to two or more network access nodes that each are forwarding-capable may therefore be particularly advantageous if one RAT connection is more power-intensive than the other as terminal device **200** may be able to temporarily disconnect the power-intensive RAT connection and forward all associated data to the other RAT connection.

For example, if the second RAT connection over second communication module **306b** requires less power consumption than the first RAT connection over first communication module **306a,** controller **308** may elect to initiate first RAT-to-second RAT forwarding and thus transmit a forwarding setup instruction to network access node **1108** that specifies the second RAT network address of terminal device **200** as the destination network address.

In some aspects, controller **308** may consider factors instead of or in addition to power consumption in deciding which RAT connection to disconnect and which to support the forwarding link (which may only be viable in scenarios where multiple RAT connections are provided by forwarding-capable network access nodes). For example, controller **308** may consider which RAT connections are most 'active', e.g., which RAT connections are receiving the heaviest data traffic, and/or which RAT connections are most likely to receive data such as, for example, paging messages. As previously introduced, common monitoring may be particularly advantageous for idle-mode monitoring for messages such as paging messages and other control information (although all data is considered applicable). As each RAT connection of terminal device **200** may operate separately and may utilize different scheduling and formatting parameters, the various RAT connections may have different traffic loads at any given time.

For example, each RAT connection may be in an active or idle state (where radio access technologies may also have other activity states), where active RAT connections may be allocated dedicated radio resources and idle RAT connections may not have any dedicated radio resources allocated. Active RAT connections may thus have a large amount of data traffic (e.g., downlink and uplink control and user data) while idle RAT connections may have a minimal amount of data traffic (e.g., limited to paging messages).

Due to the relatively heavy data traffic of active RAT connections compared to idle RAT connections, controller **308** may elect to consolidate data traffic for idle RAT connections onto the active RAT connection by establishing a forwarding link at the network access node for the idle RAT connection that forwards data to the active RAT connection. As such may require the active RAT connection to transmit both the forwarded data and the existing data of the active RAT connection, the forwarded data traffic may be light enough that the active RAT connection does not become overloaded.

For example, the idle RAT connection may only provide paging messages over the forwarding link to the active RAT, which may be relatively infrequent and only contain a small amount of data; accordingly, it may be unlikely that forwarding links will become overloaded. Conversely, if controller **308** elects to consolidate e.g., a video stream from an active RAT connection onto another active RAT connection, the latter RAT connection may become overloaded (although such may depend on the capacity and current traffic scenario of the network access node tasked with forwarding).

Controller **308** may therefore be configured to select which RAT connections to temporarily disconnect and which RAT connection to activate as a forwarding link based on data traffic loads. Controller **308** may additionally consider which RAT connection is most likely to receive incoming data; for example, a given RAT connection may generally receive incoming data such as, for example, paging messages more frequently than another RAT connection, which may be due to the underlying access protocols and/or the current status of the RAT connection. Controller **308** may thus identify which RAT connection is more likely to receive incoming data and which RAT connection is less likely to receive incoming data and subsequently assign the 'more likely' RAT connection as a forwarding link for the 'less likely' RAT connection.

Controller **308** may additionally or alternatively be configured to consider the coverage range of the network access nodes associated with each RAT connection in selecting which RAT connection to disconnect and which to use for the forwarding link. For example, cellular network access nodes (e.g., base stations) may generally have a substantially larger coverage area than short-range network access nodes (e.g., WLAN APs, Bluetooth master devices, etc.), where similar comparisons may generally be established for various radio access technologies.

As the RAT connection associated with the larger coverage area will support a larger range of mobility of terminal device **200,** controller **308** may elect to temporarily disconnect the RAT connection with the shorter range (e.g., by transmitting a forwarding setup instruction to the network access node providing the RAT connection with the shorter range) and thus utilize the RAT connection with the greater range as the forwarding link. In the exemplary setting of FIG. **11,** controller **308** may therefore select to temporarily disconnect the second RAT connection provided by network access node **1106** and thus utilize the first RAT connection via network access node **1108** as the forwarding link.

Not only may cellular network access nodes provide a larger coverage area than short-range network access nodes, many cellular radio access networks may collectively provide more consistent coverage over large geographic areas. For example, Wi-Fi network access nodes that are available to terminal device **200** (e.g., that terminal device **200** has permission or credentials to connect to) may only be sporadically available on a geographic basis, e.g., such as in a home, office, or certain other public or private locations, and may generally not form a continuous geographic region of availability. Accordingly, if terminal device **200** moves outside of the coverage area of e.g., network access node **1106,** terminal device **200** may not have any available Wi-Fi network access nodes to connect to. Consequently, if terminal device **200** selects to use a Wi-Fi connection as a forwarding link and later moves out of the coverage of the associated Wi-Fi network access node, terminal device **200** may not be able to continue to use the Wi-Fi connection as a forwarding link.

However, cellular radio access networks may generally have a largely continuous coverage area collectively formed by each cell, thus providing that terminal device **200** will have another cellular network access node available even if terminal device **200** moves outside of the coverage area of network access node **1108.** Accordingly, controller **308** may additionally or alternatively also consider which underlying radio access network provides more continuous coverage, where cellular radio access networks and other long-range radio access networks are generally considered to provide more continuous coverage than short-range radio access network such as Wi-Fi and Bluetooth.

Additionally or alternatively, in some aspects controller **308** may consider the delay and/or latency demands of one or more RAT connections. For example, certain data streams such as voice and other multimedia streaming may have strict delay and latency demands, e.g., may not be able to tolerate large amounts of delay/latency. Accordingly, if one of the RAT connections have strict delay/latency demands, controller **308** may elect to temporarily disconnect another RAT connection and continue to utilize the RAT connection with strict delay/latency demands as the forwarding link as such may preserve the ability of the strict RAT connection to continue to seamlessly receive the underlying data.

Additionally or alternatively, in some aspects controller **308** may consider the security requirements of one or more RAT connections. For example, certain data streams may have high priority security requirements and thus may be transferred only over secure links. Accordingly, if, for example, one of the RAT connections has very strict security requirements, controller **308** may elect to temporarily disconnect another RAT connection and continue to utilize the RAT connection with strict security requirements as the forwarding link.

Controller **308** may thus be configured to utilize any one or combination of these factors in selecting which RAT connection to use as a forwarding link and which RAT connection to temporarily disconnect (e.g., which to consolidate onto the forward link).

Controller **308** may additionally or alternatively be configured to adapt or switch the forwarding link based on the changing statuses of the RAT connections. For example, in an exemplary scenario of FIG. **11** where controller **308** consolidates Wi-Fi traffic onto the LTE connection via a forwarding link, the Wi-Fi connection may initially be in an idle state while the LTE connection may initially be in an active state. However, upon receipt of a forwarded Wi-Fi data packet or network management message over the LTE connection, controller **308** may activate second communication module **306b** in order to receive the incoming Wi-Fi data. As the Wi-Fi connection has therefore transitioned from idle to active and the LTE connection remains active, controller **308** may not implement any forwarding; however, if the LTE connection eventually transitions to idle, controller **308** may consolidate the LTE connection onto the Wi-Fi connection by transmitting a forwarding setup instruction to network access node **1108** that instructs network access node **1108** to forward incoming LTE data packets to the Wi-Fi network address of terminal device **200.**

Likewise, if both the LTE and the Wi-Fi connections are initially idle, controller **308** may select to consolidate data traffic from one RAT connection onto the other via a forwarding link and proceed to only monitor for data traffic on the remaining active RAT connection, for example, by establishing a forwarding link at network access node **1108** that re-routes LTE data packets addressed to terminal device **200** to the Wi-Fi connection.

If controller **308** then receives a forwarded LTE data packet from network access node **1106** over the Wi-Fi connection that contains an LTE paging message, controller **308** may subsequently activate first communication module **306a** to support the now-active LTE connection and 'switch' the forwarding link by de-activating the existing forwarding link at network access node **1108** (via a forwarding deactivation instruction) establish a new forwarding link at network access node **1106** (via a forwarding setup instruction) that forwards Wi-Fi data traffic for the still-idle Wi-Fi connection to the now-active LTE connection. All such variations are thus within the scope of this disclosure.

While the forwarding links detailed above have been described as being explicitly activated and de-activated with forwarding setup and deactivation instructions, respectively, in some aspects controller **308** may establish a forwarding link with an expiry period after which the forwarding network access node may terminate the forwarding link. For example, controller **308** may decide to establish a forwarding link for a certain time period, e.g., defined in the order of milliseconds, seconds, minutes, hours, etc., and accordingly may explicitly identify an expiry period in a forwarding setup instruction provided to a network access node, e.g., network access node **1106.** Upon receipt and identification of the forwarding setup instruction, control module **1208** may register the forwarding link as a forwarding entry in forwarding table **1112** and additionally trigger an associated timer with an expiry time equal to the expiry period specified in the forwarding setup instruction. Control module **1208** may then forward all data packets addressed to terminal device **200** according to the registered forwarding link until the timer expires, after which control module **1208** may unilaterally deactivate the forwarding link (e.g., by setting the active flag to 'off' or deleting the forwarding entry from forwarding table **1112)** and refrain from re-routing any further data packets addressed to terminal device **200** (until e.g., another forwarding setup message is received).

The RAT connections involved in the forwarding and common monitoring scheme detailed above may also be part of a multi-SIM scheme where e.g., some RAT connections are associated with a first SIM and other RAT connections are associated with a second SIM.

FIG. **14** shows method **1400** of performing radio communications in connection with the forwarding and common monitoring scheme detailed above. As shown in FIG. **14,** method **1400** includes transmitting and receiving data over a first radio access connection with a first network access node **(1410),** transmitting and receiving data over a second radio access connection with a second network access node **(1420),** wherein the first radio access connection and the second radio access connection utilize different radio access technologies, establishing a forwarding link that instructs the first network access node to re-route data intended for the first radio access connection to the second radio access connection **(1430),** and receiving data for the first radio access connection and the second radio access connection over the second radio access connection **(1440).**

In one or more further exemplary aspects of the disclosure, one or more of the features described above in reference to FIGS. **11-13** may be further incorporated into method **1400.** In particular, method **1400** may be configured to perform further and/or alternate processes as detailed regarding terminal device **200.**

## 2 Power-Efficiency

Power management may be an important consideration for both network access nodes and terminal devices in radio communication networks. For example, terminal devices may need to employ power-efficient designs to reduce battery drain and increase operation time while network access nodes may strive for power efficiency in order to reduce operating costs. Power-efficient designs and features may therefore be exceedingly valuable.

FIG. **15** shows radio communication network **1500** in accordance with some aspects, which may include terminal devices **1502** and **1504** in addition to network access nodes **1510** and **1512.** Although certain aspects of this disclosure may describe certain radio communication network setting (such as e.g., an LTE, UMTS, GSM, other 3$^{rd}$ Generation Partnership Project (3GPP) networks, WLAN/Wi-Fi, Bluetooth, 5G, mmWave, etc.), the subject matter detailed herein is considered demonstrative in nature and may therefore be analogously applied to any other radio communication network. The number of network access nodes and terminal devices in radio communication network **1500** is exemplary and is scalable to any amount.

Accordingly, in an exemplary cellular setting network access nodes **1510** and **1512** may be base stations (e.g., eNodeBs, NodeBs, Base Transceiver Stations (BTSs), etc.) while terminal devices **1502** and **1504** may be cellular terminal devices (e.g., Mobile Stations (MSs), User Equipments (UEs), etc.). Network access nodes **1510** and **1512** may therefore interface (e.g., via backhaul interfaces) with a cellular core network such as an Evolved Packet Core (EPC, for LTE), Core Network (CN, for UMTS), or other cellular core network, which may also be considered part of radio communication network 1500. The cellular core network may interface with one or more external data networks. In an exemplary short-range setting, network access node **1510** and **1512** may be access points (APs, e.g., WLAN or Wi-Fi APs) while terminal device **1502** and **1504** may be short range terminal devices (e.g., stations (STAs)). Network access nodes **1510** and **1512** may interface (e.g., via an internal or external router) with one or more external data networks.

Network access nodes **1510** and **1512** (and other network access nodes of radio communication network **1500** not explicitly shown in FIG. **15)** may accordingly provide a radio access network to terminal devices **1502** and **1504** (and other terminal devices of radio communication network **1500** not explicitly shown in FIG. **15).** In an exemplary cellular setting, the radio access network provided by network access nodes **1510** and **1512** may enable terminal devices **1502** and **1504** to wirelessly access the core network via radio communications. The core network may provide switching, routing, and transmission of traffic data related to terminal devices **1502** and **1504** and may provide access to various internal (e.g., control nodes, other terminal devices on radio communication network **1500,** etc.) and external data networks (e.g., data networks providing voice, text, multimedia (audio, video, image), and other Internet and application data). In an exemplary short-range setting, the radio access network provided by network access nodes **1510** and **1512** may provide access to internal (e.g., other terminal devices connected to radio communication network **1500)** and external data networks (e.g., data networks providing voice, text, multimedia (audio, video, image), and other Internet and application data). Network access nodes **1510** and **1512** may be network access nodes for any other type of radio access technology and analogously provide a radio access network to proximate terminal devices in this manner.

The radio access network and core network (if applicable) of radio communication network **1500** may be governed by network protocols that may vary depending on the specifics of radio communication network **1500.** Such network protocols may define the scheduling, formatting, and routing of both user and control data traffic through radio communication network **1500,** which includes the transmission and reception of such data through both the radio access and core network domains of radio communication network **1500.** Accordingly, terminal devices **1502** and **1504** and network access nodes **1510** and **1512** may follow the defined network protocols to transmit and receive data over the radio access network domain of radio communication network **1500** while the core network may follow the defined network protocols to route data within and outside of the core network. Exemplary network protocols include LTE, UMTS, GSM, WiMAX, Bluetooth, Wi-Fi, mmWave, etc., any of which may be applicable to radio communication network **1500.**

Both the radio access network and core network of radio communication network **1500** may be governed by network protocols that may vary depending on the specifics of radio communication network **1500.** Such network protocols may define the scheduling, formatting, and routing of both user and control data traffic through radio communication network **1500,** which includes the transmission and reception of such data through both the radio access and core network domains of radio communication network **1500.** Accordingly, terminal devices **1502** and **1504** and network access nodes **1510** and **1512** may follow the defined network protocols to transmit and receive data over the radio access network domain of radio communication network **1500** while the core network may follow the defined network protocols to route data within and outside of the core network. Exemplary network protocols include LTE, UMTS, GSM, WiMax, Bluetooth, Wi-Fi, etc., or other 2G, 3G, 4G, 5G, next generation like 6G, etc. technologies either already developed or to be developed, any of which may be applicable to radio communication network **1500.**

FIG. **16** shows an internal configuration of terminal device **1502,** which may include antenna system **1602,** radio frequency (RF) transceiver **1604,** baseband modem **1606** (including physical layer processing module **1608** and controller **1610),** data source **1612,** memory **1614,** data sink **1616,** and power supply **1618.** Although not explicitly shown in FIG. **16,** terminal device **1502** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identity module(s) (SIMs), user input/output devices (display(s), keypad(s), touchscreen(s), speaker(s), external button(s), camera(s), microphone(s), etc.), etc.

Terminal device **1502** may transmit and receive radio signals on one or more radio access networks. Baseband modem **1606** may direct such communication functionality of terminal device **1502** according to the communication protocols associated with each radio access network, and may execute control over antenna system **1602** and RF transceiver **1604** in order to transmit and receive radio signals according to the formatting and scheduling parameters defined by each communication protocol. Although various practical designs may include separate communication subsystems for each supported radio access technology (e.g., a separate antenna, RF transceiver, physical layer processing module, and controller), for purposes of conciseness the configuration of terminal device **1502** shown in FIG. **16** depicts only a single instance of each such components.

Terminal device **1502** may transmit and receive radio signals with antenna system **1602,** which may be a single antenna or an antenna array including multiple antennas and may additionally include analog antenna combination and/or beamforming circuitry. In the receive path (RX), RF transceiver **1604** may receive analog radio frequency signals from antenna system **1602** and perform analog and digital RF front-end processing on the analog radio frequency signals to produce digital baseband samples (e.g., In-Phase/Quadrature (IQ) samples) to provide to baseband modem **206.** RF transceiver **1604** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **1604** may receive digital baseband samples from baseband modem **1606** and perform analog and digital RF front-end processing on the digital baseband samples to produce analog radio frequency signals to provide to antenna system **1602** for wireless transmission. RF transceiver **1604** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **1606** to produce the analog radio frequency signals for wireless transmission by antenna system **1602.** Baseband modem **1606** may control the RF transmission and reception of RF transceiver **1604,** including specifying the transmit and receive radio frequencies for operation of RF transceiver **1604.**

As shown in FIG. **16,** baseband modem **1606** may include physical layer processing module **1608,** which may perform physical layer (Layer 1) transmission and reception processing to prepare outgoing transmit data provided by controller **1610** for transmission via RF transceiver **1604** and prepare incoming received data provided by RF transceiver **1604** for processing by controller **1610.** Physical layer processing module **3488** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Physical layer processing module **1608** may be structurally realized as a hardware-defined module, e.g., as one or more dedicated hardware circuits or FPGAs, as a software-defined module, e.g., as a processor configured to retrieve and execute program code defining arithmetic, control, and I/O instructions (e.g., software and/or firmware) stored in a non-transitory computer-readable storage medium, or as a mixed hardware-defined and software-defined module. Although not explicitly shown in FIG. **16,** physical layer processing module **1608** may include a physical layer controller configured to retrieve and execute software-defined instructions that control the various hardware and software processing components of physical layer processing module **1608** in accordance with physical layer control logic defined by the communications protocol for the relevant radio access technologies. Furthermore, while physical layer processing module **1608** is depicted as a single component in FIG. **16,** in some aspects physical layer processing module **1608** may be collectively implemented as separate sections of physical layer processing components where each respective section is dedicated to the physical layer processing of a particular radio access technology.

Terminal device **1502** may be configured to operate according to one or more radio access technologies, which may be directed by controller **1610.** Controller **1610** may thus be responsible for controlling the radio communication components of terminal device **1502** (antenna system **1602,** RF transceiver **1604,** and physical layer processing module **1608)** in accordance with the communication protocols of each supported radio access technology, and accordingly may represent the Access Stratum and Non-Access Stratum (NAS) (also encompassing Layer 2 and Layer 3) of each supported radio access technology. In some aspects, controller **1610** may be structurally embodied as a protocol processor configured to execute protocol software (e.g., from memory **1614** or a local controller or modem memory) and subsequently control the radio communication components of terminal device **1502** in order to transmit and receive communication signals in accordance with the corresponding protocol control logic defined in the protocol software.

Controller **1610** may therefore be configured to manage the radio communication functionality of terminal device **1502** in order to communicate with the various radio and core network components of radio communication network **1500,** and accordingly may be configured according to the communication protocols for multiple radio access technologies. Controller **1610** may either be a unified controller that is collectively responsible for all supported radio access technologies (e.g., LTE and GSM/UMTS) or may be implemented as multiple separate controllers where each controller is a dedicated controller for a particular radio access technology, such as a dedicated LTE controller and a dedicated legacy controller (or alternatively a dedicated LTE controller, dedicated GSM controller, and a dedicated UMTS controller). Regardless, controller **1610** may be responsible for directing radio communication activity of terminal device **1502** according to the communication protocols of the LTE and legacy networks. As previously noted regarding physical layer processing module **1608,** one or both of antenna system **1602** and RF transceiver **1604** may similarly be partitioned into multiple dedicated components that each respectively correspond to one or more of the supported radio access technologies. Depending on the specifics of each such configuration and the number of supported radio access technologies, controller **1610** may be configured to control the radio communication operations of terminal device **1502** in accordance with a master/slave Radio Access Technology (RAT) hierarchical or multi-Subscriber Identify Module (SIM) scheme.

Terminal device **1502** may also include data source **1612,** memory **1614,** data sink **1616,** and power supply **1618,** where data source **1612** may include sources of communication data above controller **1610** (e.g., above the NAS/Layer 3) and data sink **1616** may include destinations of communication data above controller **1610** (e.g., above the NAS/Layer 3). Such may include, for example, an application processor of terminal device **1502,** which may be configured to execute various applications and/or programs of terminal device **1502** at an application layer of terminal device **1502,** such as an Operating System (OS), a User Interface (UI) for supporting user interaction with terminal device **1502,** and/or various user applications. The application processor may interface with baseband modem **1606** (as data source **1612**/data sink **1616)** as an application layer to transmit and receive user data such as voice data, audio/video/image data, messaging data, application data, basic Internet/web access data, etc., over radio network connection(s) provided by baseband modem **1606.** In the uplink direction, the application layers (data sink **1616)** can provide data (e.g., Voice Over IP (VoIP) packets, UDP packets, etc.) to baseband modem **1606,** which may then encode, modulate, and transmit the data as radio signals via radio transceiver **1604** and antenna system **1602.** In the downlink direction, baseband modem **1606** may demodulate and decode IQ samples provided by RF transceiver **1604** to generate downlink traffic. Baseband modem **1606** may then provide the downlink traffic to the application layers as data source **1612.** Data source **1612** and data sink **1616** may additionally represent various user input/output devices of terminal device **1502,** such as display(s), keypad(s), touchscreen(s), speaker(s), external button(s), camera(s), microphone(s), etc., which may allow a user of terminal device **1502** to control various communication functions of terminal device **1502** associated with user data.

Memory **1614** may embody a memory component of terminal device **1502,** such as a hard drive or another such permanent memory device. Although not explicitly depicted in FIG. **16,** in some aspects the various other components of terminal device **1502** shown in FIG. **16** may additionally each include integrated permanent and non-permanent memory components, such as for storing software program code, buffering data, etc.

Power supply **1618** may be an electrical power source that provides power to the various electrical components of terminal device **1502.** Depending on the design of terminal device **1502,** power supply **1618** may be a 'definite' power source such as a battery (rechargeable or disposable) or an 'indefinite' power source such as a wired electrical connection. Operation of the various components of terminal device **1502** may thus pull electrical power from power supply **1618.**

Terminal devices such as terminal devices **1502** and **1504** of FIG. **15** may execute mobility procedures to connect to, disconnect from, and switch between available network access nodes of the radio access network of radio communication network **1500**. As each network access node of radio communication network **1500** may have a specific coverage area, terminal devices **1502** and **1504** may be configured to select and re-select between the available network access nodes in order to maintain a strong radio access connection with the radio access network of radio communication network **1500.** For example, terminal device **1502** may establish a radio access connection with network access node **1510** while terminal device **1504** may establish a radio access connection with network access node **1512.** In the event that the current radio access connection degrades, terminal devices **1502** or **1504** may seek a new radio access connection with another network access node of radio communication network **1500;** for example, terminal device **1504** may move from the coverage area of network access node **1512** into the coverage area of network access node **1510.** As a result, the radio access connection with network access node **1512** may degrade, which terminal device **1504** may detect via radio measurements such as signal strength or signal quality measurements of network access node **1512.** Depending on the mobility procedures defined in the appropriate network protocols for radio communication network **1500,** terminal device **1504** may seek a new radio access connection (which may be triggered at terminal device **1504** or by the radio access network), such as by performing radio measurements on neighboring network access nodes to determine whether any neighboring network access nodes can provide a suitable radio access connection. As terminal device **1504** may have moved into the coverage area of network access node **1510,** terminal device **1504** may identify network access node **1510** (which may be selected by terminal device **1504** or selected by the radio access network) and transfer to a new radio access connection with network access node **1510.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

The various network activities of terminal devices **1502** and **1504** and network access nodes **1510** and **1512** may necessarily consume power, such as in the transmission, reception, and processing of radio signals. Furthermore, power consumption may not be limited to exclusively network activities as many terminal devices may serve other purposes other than radio communications, such as in the case of e.g., smartphones, laptops, and other user-interactive devices. While terminal devices may generally be low-power devices, many terminal devices may additionally be mobile or portable and may thus need to rely on 'finite' battery power. Conversely, network access nodes such as cellular base stations and WLAN APs may generally (although not exclusively) have 'unlimited' wired power supplies; however, the high-transmission power and infrastructure support demands may expend considerable power and thus may lead to high operating costs. Accordingly, power-efficient designs may play a vital role in prolonging battery life at terminal devices and reducing operating costs at network access nodes.

Aspects disclosed herein may improve power-efficiency in radio access networks. Such aspects may be realized through efficient operational and structural design at terminal devices and network access nodes in order to reduce power consumption, thus prolonging battery life and reducing operating costs.

2.1 Power-Efficiency #1

According to an aspect of the disclosure, a radio access network may provide multiple different options of radio access channels for terminal devices; for example, as opposed to providing only a single paging, control, traffic data, or random access channel, a radio access network may provide multiple paging/control/random access channels, or multiple ‘channel instances’, that are each tailored to different needs, e.g., to a different power consumption level (e.g., power efficiency) need. Accordingly, terminal devices may be able to selectively choose which channel instances to utilize based on a desired power efficiency, e.g., where some terminal devices low-power consumption channels (that may offer higher power efficiency at the cost of performance) while other terminal devices may opt for ’normal’ power consumption channels. In addition to power efficiency, terminal devices may also consider latency and reliability requirements when selecting channel instances. Some aspects may be applied with control, paging, and/or random access channels, where multiple of each may be provided that are each tailored for different power-efficiency, reliability, and latency characteristics. These aspects can be used with common channel aspects, e.g., a common channel tailored to specific power efficiency needs.

Network access nodes and terminal devices may transmit and receive data on certain time-frequency physical channels where each channel may be composed of specific frequency resources (e.g., bands or subcarriers) and defined for specific time periods. The time-frequency resources and data contents of such physical channels may be defined by the associated network access protocols, where e.g., an LTE framework may specify certain time-frequency resources for physical channels that are particular to LTE, a UMTS framework may specify certain time-frequency resources for physical channels that are particular to UMTS, etc. Physical channels may conventionally be allocated as either uplink or downlink channels, where terminal devices may utilize uplink channels to transmit uplink data while network access nodes may utilize downlink channels to transmit downlink data. Physical channels may be further assigned to carry specific types of data, such as specific channels exclusively designated to carry user data traffic and other channels designated to carry certain types of control data.

In various aspects, physical channels may be specific sets of time and/or frequency resources. For example, in some aspects a physical channel may be constantly allocated to a dedicated set of frequency resources, such as a subcarrier (or set of subcarriers) that only carries control data in the exemplary setting of a control channel. Additionally or alternatively, in some aspects a physical channel may be allocated time-frequency resources that vary over time, such as where a physical channel is allocated a varying set of time-frequency resources (e.g., subcarriers and time periods). For example, a paging channel may occupy different time periods and/or subcarriers over time. Accordingly, a physical channel is not limited to a fixed set of time-frequency resources.

The allocation of time-frequency resources for physical channels can depend on the corresponding radio access technology. While LTE will be used to describe the allocation of time-frequency resources for physical channels, this explanation is demonstrative and can be applied without limitation to other radio access technologies. The allocation of time-frequency resources for LTE radio access channels is defined by the 3GPP in 3GPP Technical Specification (TS) 36.211 V13.1.0, "Physical Channels and modulation" ("3GPP TS 36.211"). As detailed in 3GPP TS 36.211, LTE downlink discretizes the system bandwidth over time and frequency using a multi-subcarrier frequency scheme where the system bandwidth is divided into a set of subcarriers that may each carry a symbol during a single symbol period. In time, LTE downlink (for Frequency Division Duplexing (FDD)) utilizes 10 ms radio frames, where each radio frame is divided into 10 subframes each of 1 ms duration. Each subframe is further divided into two slots that each contain 6 or 7 symbol periods depending on the Cyclic Prefix (CP) length. In frequency, LTE downlink utilizes a set of evenly-spaced subcarriers each separated by 15 kHz, where each block of 12 subcarriers over 1 slot is designated as a Resource Block (RB). The base time-frequency resource may thus be a single subcarrier over a single symbol period, defined by the 3GPP as a Resource Element (RE) where each RB thus contains 180 REs.

FIG. **17** depicts exemplary downlink resource grid **1700** in accordance with some aspects, which may be an LTE resource grid showing over two subframes and 1 resource block of subcarriers. Each unit block of downlink resource grid **1700** may represent one RE, e.g., one symbol period for one subcarrier, for a normal CP length. As specified by the 3GPP, downlink subframes may generally be divided into a control and data region, where the first several symbols are allocated for control data in the control region and the remaining symbol are allocated for user data traffic in the data region. Depending on the system bandwidth and control format, each subframe may contain between one and three control symbols at the beginning of each subframe (as indicated by a Control Format Indicator (CFI) provided on the Physical CFI Channel (PCFICH) which appears on certain REs in first symbol of each subframe).

FIG. **17** depicts the control region as containing Physical Downlink Control Channel (PDCCH) data. While the data region may generally contain Physical Downlink Shared Channel (PDSCH) data, REs in both regions may be allocated to other physical channels such as Physical Broadcast Channel (PBCH), Physical Hybrid Automatic Repeat Request (HARQ) Indicator Channel (PHICH), Physical Multicast Channel (PMCH), and the aforementioned PCFICH as detailed in 3GPP TS 36.211. Accordingly, each LTE physical downlink channel may be composed of specific REs (time-frequency resources) that carry data unique to that channel.

The physical time-frequency resources (REs) of the resource grid may therefore be allocated to specific physical channels. Each physical channel may carry specific data provided by one or more transport channels, which may in turn each provide specific data to a particular physical channel that is provided by one or more particular logical channels. FIG. **18** shows an exemplary channel mapping illustrating the transport channel mapping for the PDSCH and PDCCH physical channels. As shown in FIG. **18,** the PDCCH channel may carry Downlink Control Information (DCI) data, which may be control messages addressed to specific UEs that may be transmitted on the PDCCH, while the PDSCH channel may carry data provided by the Paging Channel (PCH) and Downlink Shared Channel (DL-SCH) logical channels. The PCH may carry paging messages addressed to specific UEs while the DL-SCH may mainly carry user data traffic in addition to some control information. Accordingly, while the REs of downlink resource grid **1700** may be directly allocated to physical channels, each physical channel may contain data provided via the associated transport and logical channels including traffic data, control data, and paging data.

A terminal device such as terminal device **1502** or **1504** receiving downlink signals from a network access nodes such as network access node **1510** or **1512** may therefore be able to process each data contained at each time-frequency element of the downlink signal in order to recover the data from each channel. In an exemplary LTE setting, terminal device **1502** may process PDCCH REs in order to recover important control data (specified in a DCI message addressed to terminal device **1502)** that may identify the presence of other incoming data in the PDSCH REs that is addressed to terminal device **1502.** The type of data indicated in a DCI message may depend on the current radio access status of terminal device **1502.** For example, if terminal device **1502** is currently in a connected radio state terminal device **1502** may be allocated dedicated downlink resources to receive traffic data on the PDSCH. Accordingly, terminal device **1502** may monitor the PDCCH during each subframe to identify DCI messages addressed to terminal device **1502** (e.g., via a Radio Network Temporary Identity (RNTI)), which may specify the location of PDSCH REs containing downlink data intended for terminal device **1502** in addition to other parameters related to the downlink data.

Alternatively, if terminal device **1502** is currently in an idle radio state, terminal device **1502** may not be in position to receive any traffic data on the PDSCH and may instead only be in position to receive paging messages that signal upcoming traffic data intended for terminal device **1502.** Accordingly, terminal device **1502** may monitor the PDCCH in certain subframes (e.g., according to periodic paging occasions) in order to identify paging control messages (DCI messages addressed with a Paging RNTI (P-RNTI)) that indicates that the PDSCH will contain a paging message. Terminal device **1502** (along with other idle mode UEs) may then receive the paging message on the PDSCH and identify whether the paging message is intended for terminal device **1502** (e.g., by means of a System Architecture Evolution (SAE) Temporary Mobile Subscriber Identity (S-TMSI) or International Mobile Subscriber Identity (IMSI) included in the paging message).).

In other words, terminal device **1502** may monitor a control channel and a paging channel for control and paging messages intended for terminal device **1502,** where both the paging channel and the control channel may be composed of specific time-frequency resources. In addition, any reference to LTE is only for demonstrative purposes and is utilized only to provide contextual information for radio resource allocations for physical channels. Various other radio access technologies may also specify control and paging channels composed of specific time-frequency resources that a terminal device may need to monitor for the presence of control and paging messages addressed to the terminal device. Accordingly, physical channels in other radio access technologies may similarly utilize dynamic allocations of time-frequency resources.

Terminal device **1502** may transmit uplink data to a network access node such as network access nodes **1510** and **1512.** While uplink resource grids may utilize a time-frequency discretization scheme similar to downlink resource grids, the resource allocation scheme per terminal device may differ slightly between downlink and uplink. This may depend on the specifics of the radio access technology, and some radio access technologies may use different uplink and downlink allocation schemes and physical layer waveforms in the uplink and downlink while other radio access technologies may use the same uplink and downlink allocation scheme and/or physical layer waveforms in the uplink and downlink. For example, LTE downlink primarily utilizes Orthogonal Frequency Division Multiple Access (OFDMA) for multiple access, where RBs may be allocated in a distributed and non-contiguous fashion to different users; accordingly, along the direction of the frequency axis the RBs addressed to a specific user may be interleaved with RBs addressed to other users and may not be neighboring in the downlink resource grid. In contrast, uplink primarily utilizes Single Carrier Frequency Division Multiple Access (SC-FDMA) in which at any point in time only a set of RBs which is contiguous along the direction of the frequency axis may be allocated to a single user.

FIG. **19** shows exemplary uplink resource grid **1900,** which may be an LTE resource grid over 25 resource blocks and two radio frames and may constitute an exemplary 5 MHz system bandwidth for FDD. As indicated above, uplink resource allocations may generally be restricted to utilize only blocks which are contiguous along the direction of the frequency axis. Note that the radio resources of uplink resource grid **1900** are shown on a different scale from downlink resource grid **1700** where each unit block of uplink resource grid **1900** represents the subcarriers of a single resource block over one subframe (two resource blocks in total).

As denoted by the shading in FIG. **19,** the time-frequency resources of uplink resource grid **1900** may also be allocated to specific uplink physical channels including the Physical Uplink Control Channel (PUCCH), Physical Uplink Shared Channel (PUSCH), and Physical Random Access Channel (PRACH). PUCCH allocations may generally be at the upper and lower ends of the system bandwidth while the remaining portion of the system bandwidth may generally be allocated for PUSCH transmissions. Accordingly, UEs such as terminal device **1502** may be allocated radio resources (via uplink grants provided by the radio access network on the PDCCH) in order to transmit uplink traffic data on the PUSCH and uplink control data on the PUCCH.

As specified by a wireless communication standard, such as 3GPP TS 36.211, certain resource blocks generally located in the central region of the system bandwidth may be allocated for PRACH transmission. UEs such as terminal device **1502** may utilize the PRACH in order to establish an active radio connection with an eNodeB such as network access node **1510,** which may occur during a transition from an idle to a connected state, during a handover to network access node **1510,** or if timing synchronization with network access node **1510** has been lost. As opposed to the PUCCH and PUSCH radio resources that may each be uniquely allocated to individual UEs, eNodeBs may broadcast system information that identifies the PRACH radio resources (e.g., in form of a System Information Block (SIB)) to all UEs in a cell. Accordingly, PRACH radio resources may be available for use by any one or more UEs. Terminal device **1502** may therefore receive such system information from network access node **1510** in order to identify the PRACH configuration (PRACH Configuration Index), which may specify both the specific radio resources (in time and frequency) allocated for PRACH transmissions, known as a PRACH occasion, and other important PRACH configuration parameters. Terminal device **1502** may then generate and transmit a PRACH transmission containing a unique PRACH preamble that identifies terminal device **1502** during a PRACH occasion. Network access node **1510** may then receive radio data during the PRACH occasion and decode the received radio data in order to recover all PRACH transmissions transmitted by nearby UEs on the basis of the unique PRACH preamble generated by each UE. Network access node **1510** may then initiate establishment of an active radio connection for terminal device **1502.**

Terminal devices may therefore transmit and receive data on specific uplink and downlink channels that are defined as time-frequency radio resources. These channels may include paging, random access, control channels, traffic data channels, and various other channels depending on the particulars of the associated radio access standard. As described above in the exemplary case of LTE, such may include the PDCCH (control), PDSCH (traffic data), PUCCH (control), PUSCH (traffic data), and PRACH (random access), where the PDCCH and PDSCH may also be considered 'physical' paging channels due to the transport of paging DCI messages (DCI 1C, addressed with P-RNTI) on the PDCCH and RRC paging messages on the PDSCH. Regardless of the specifics, physical channels for each radio access technology may be defined in time-frequency resources and may be available for transmission and reception of specific data by terminal devices and network access nodes. Accordingly, while each radio access standard may have a unique physical channel scheme, the common underlying features and usage of all radio access channels renders aspects disclosed herein applicable for radio channels of any radio access technology.

Instead of providing only a single 'instance' of such channels, various aspects may provide multiple instances of physical channels that have different characteristics. Furthermore, one or more of the channel instances may have characteristics tailored to a specific power efficiency, specific latency, and/or specific reliability, which may enable terminal devices to select which channel instance to utilize based on their current power efficiency and/or data connection characteristics (including the reliability and latency). The different channel instances may each utilize different settings such as periodicity, time, expected traffic, etc., in order to enable each channel instance to effectively provide desired power-efficiency, latency, and reliability levels. Furthermore, various channel instances may be provided via different radio access technologies, where channel instances provided by lower power radio access technologies may present a more power efficient option than other channel instances provided by higher power radio access technologies. Likewise, certain radio access technologies may provide greater reliability and/or lower latency, thus providing channel instances of varying reliability and latency across different radio access technologies.

FIG. **20** shows an exemplary network scenario for radio communication network **2000** according to an aspect of the disclosure. As shown in FIG. **20,** radio communication network **2000** may include terminal device **1502,** network access node **2002,** network access node **2004,** network access node **2006,** and core network **2008.** In some aspects, network access nodes **2002-2006** may be configured according to the same radio access technology, while in other aspects network access node **2002-2006** may be configured according to different radio access technologies. For example, in an exemplary scenario, network access node **2002** may be cellular base station while network access nodes **2004** and **2006** may be short-range access points, such as eNodeB **2002,** WLAN AP **2004,** and Bluetooth Low Energy (BT LE) node **2006.** Other exemplary scenarios with various radio access technologies are also within the scope of this disclosure.

Network access nodes **2002-2006** may be part of the radio access network of the radio communication network **2000** in order to provide radio access connections to terminal devices, such as terminal device **1502,** thus providing a connection to core network **2008** and to other external data networks (such as external Packet Data Networks (PDNs), Internet Protocol (IP) Multimedia Subsystem (IMS) servers, and other Internet-accessible data networks). The description of radio communication network **2000** below is demonstrative and any radio access technology may be incorporated into radio communication network **2000.** This includes, for example, other 2G, 3G, 4G, 5G, etc. technologies either already developed or to be developed.

Terminal device **1502** may transmit and receive radio signals on various physical channels with the various network access nodes **2002-2006** of radio communication network **2000.** Network access nodes **2002-2006** may provide their respective physical channels according to the specifics of their respective RATs, which as previously indicated may be the same or different.

One or more of network access nodes **2002-2006** may offer a single 'instance' of each channel type, for example, with additional reference to FIG. 17 network access node **2002** may provide a single control channel instance where the control channel for each subframe has a constant and uniform configuration. Similarly, network access node **2002** may provide a single random access channel instance (by monitoring for uplink random access channel transmissions during random access channel occasions) according to a random access channel configuration, a single data traffic channel instance, a single uplink control channel instance, single uplink data traffic channel instance, etc. Stated another way, terminal device **1502** may not be free to select between multiple instances of each specific channel.

Thus, according to an aspect of the disclosure, network access nodes such as network access node **2002** may provide multiple channel instances, e.g., multiple physical channel configurations for a given channel type, thus enabling terminal devices to select between the channel instances according to an operational profile of a terminal device. As shown in FIG. **20,** in an exemplary application, network access node **2002** may provide a broadcast channel BCH, a first and second paging channel PCH1 and PCH2, a first and second random access channel RACH1 and RACH2, and/or a first and second control channel CCH1 and CCH2. Terminal devices served by network access node **2002** may therefore have the option to select between the different channel instances (PCH1 vs. PCH2, RACH1 vs. RACH2, CCH1 vs. CCH2) when transmitting and receiving relevant data. Although specific channel types are denoted herein, in some aspects network access nodes such as network access node **2002** may provide other types of channel instances such as multiple traffic data channel instances, e.g., a first and second downlink data traffic channel, a first and second uplink data traffic channel, etc. Additionally or alternatively, the number of channel instances for each channel type can be scaled to any quantity.

One or more of the channel instances may be configured differently in order to have specific characteristics, e.g., in order to provide different levels of power efficiency, different levels of latency, and/or different levels of reliability. For example, PCH1 may be configured to enable lower power expenditure than PCH2 for terminal devices that utilize the channels; likewise, CCH1 may offer lower power expenditures than CCH2 while RACH1 may offer lower power expenditures than RACH2. Alternatively, PCH2 may provide lower latency and/or higher reliability than PCH1. The differing configurations and resulting power-efficiency, latency, and reliability characteristics may provide terminal devices with varying options in terms of which channel instances to utilize.

As each of the channel instances may function independently (e.g., logically separate from the other channel instances), each channel instance may be allocated a different set of time-frequency radio resources. FIGs. **21** and **22** depict exemplary channel resource allocations according to some aspects, with downlink resource grid **2100** showing a traffic channel (TCH), control channel instances CCH1 and CCH2, and paging channel instances PCH1 and PCH2, while uplink resource grid **2200** shows control channel CCH, traffic channel TCH, and random access channel instances RACH1 and RACH2. The channel resource allocation shown in FIG. **22** is exemplary and similar channel resource allocations can be realized for various different radio access technologies.

As shown in FIG. **21,** network access node **2002** may provide CCH1 in the first two symbols of each subframe and CCH2 in the third symbol of each subframe; accordingly, terminal devices may have the option to utilize CCH1 if power efficiency is not of concern or to use CCH2 if power efficiency is of concern. As CCH2 includes less time-frequency elements, terminal devices may be able to decode CCH2 with less processing power and may accordingly be able to limit power expenditure when utilizing CCH2. As described above regarding downlink resource grid **1700,** in some aspects the control channel can additionally carry paging control messages (e.g., DCI messes addressed with a P-RNTI in an exemplary LTE setting), which idle mode terminal devices may need to monitor for in order to identify that the upcoming TCH will contain a paging message. Accordingly, CCH1 may also serve as PCH1. Terminal devices utilizing PCH1 may therefore monitor CCH1 (e.g., according to an assigned DRX cycle) for paging control messages.

These radio resource allocations are exemplary, and there exist numerous different variations for radio resource allocations for the various channel instances and all such variations are considered within the scope of this disclosure. For example, other physical channel configurations for the various channel instances may provide higher reliability and/or latency, e.g., where paging channels with a shorter period may provide for lower-latency paging (with higher energy costs) while paging channels with a longer period have higher-latency paging. The radio resource allocation (or possible sets of radio resource allocations) may can be part of a defined standard, which may thus enable both terminal devices and network access nodes to have knowledge of the radio resources allocated for each channel instance. As will be described, the radio access network may broadcast the configuration information for each channel instance in order to provide terminal devices with the information necessary to access each channel instance.

With continued reference to FIG. **20,** in some aspects the radio access network may additionally provide channel instances on different radio access technologies. The differences between the radio access technologies may also introduce differences in power-efficiency, latency, and/or reliability in each of the channel instances. As shown in FIG. **20,** network access node **2004** and network access node **2006** may additionally interface with network access node **2002.** Accordingly, network access node **2004** and network access node **2006** may cooperate with network access node **2002** in order to provide further channel instances on their respective radio access technologies. For example, network access node **2002** may be configured according to a first radio access technology, network access node **2004** may be configured according to a second radio access technology, and network access node **2006** may be configured according to a third radio access technology. Network access node **2004** and network access node **2006** may then additionally provide paging channel instances PCH3 and PCH4 on the second and third radio access technologies, respectively (which may also occur on different frequency resources from those employed by network access node **2002,** such as on an unlicensed band compared to a licensed band employed by network access node **2002).** Accordingly, in addition to the paging channel instances PCH1 and PCH2 provided by network access node **2002** on the first radio access technology, terminal device **1502** may be able to utilize PCH3 and PCH4 using the second or third radio access technology, respectively. Network access nodes **2002-2006** may additionally or alternatively cooperate in order to provide any such channel instances, e.g., random access channel instances, control channel instances, traffic data channel instances, etc. As network access node **2004** and network access node **2006** interface with network access node **2002,** cooperation between network access nodes **2002-2006** may be straightforward in order to forward data between the network access nodes and manage all such channel instances.

Terminal device **1502** may therefore be able to select between the various channel instances when exchanging uplink and downlink data with the radio access network collectively composed of network access node **2002,** network access node **2004,** and network access node **2006.** For example, terminal device **1502** may be able to select either channel instance in terms of random access channel, paging channel, and control channel in order to transmit or receive the associated data. Terminal device **1502** may select channel instances based on an ‘operational profile’ of terminal device **1502,** which may depend on the current power, latency, and reliability requirements of terminal device **1502.**

For example, certain types of terminal devices may serve certain applications that result in specific power, latency, and reliability requirements. For example, various devices dedicated to IoT applications may have extreme battery life requirements, such as certain types of sensors designed for operation over several years at a time without recharging or battery replacement, and may consequently require high power-efficiency. A non-limiting example can be a temperature sensor in a forest with a target battery lifetime of e.g., 10 years. The IoT applications served by these devices are typically more latency tolerant, and consequently may not have strict latency requirements compared to other devices.

Other types of terminal devices may be dedicated to V2X or machine control communications, such as vehicular terminal devices for autonomous driving or remote control for robots in a factory or production hall. Due to the critical and time-sensitive nature of such communications, these devices can have extremely high reliability requirements and low-latency requirements. Extreme battery life may in some cases not be as consequential, as recharging may be more regularly be available.

Other types of terminal devices may be ’multi-purpose’ devices, such as smartphones, tablets, laptops, which may be heavily user-interactive and serve a diverse set of applications depending on use by the user. The power, latency, and reliability characteristics may vary depending on the applications being used. For example, a user could use a multipurpose terminal device for a variety of applications including, without limitation, mobile real-time gaming, credit card reader, voice/video calls, or and web browsing. Mobile real-time gaming may low latency requirements, which may be more important than reliability and power-efficiency. Credit card reader applications may place higher importance on reliability than latency or power efficiency. Power efficiency may be more important for voice/video calls and web browsing, but there may not be as ’extreme’ power-efficiency requirements as in the case of devices with certain IoT applications.

FIG. **23** shows method **2300** in accordance with some aspects, which terminal device **1502** may execute in order to select and utilize a specific radio access channel instance based on an operational profile of terminal device **1502,** which may depend on the power efficiency, latency, and reliability demands of terminal device **1502.** Terminal device **1502** may primarily execute the control logic of method **2300** at controller **1610,** which may utilize the radio transmission and reception services provided by antenna system **1602,** RF transceiver **1604,** and physical layer processing module **1608** in order to trigger transmission and reception of radio signals over the radio access network. As previously noted, while FIG. **16** depicts antenna system **1602,** RF transceiver **1604,** and physical layer processing module **1608** as single components for purposes of conciseness, each of antenna system **1602,** RF transceiver **1604,** and physical layer processing module **1608** may contain radio communication components for multiple radio access technologies, such as LTE, UMTS, GSM, Bluetooth, Wi-Fi, mmWave, 5G, etc.

In **2310,** controller **1610** may receive channel configuration information from the radio access network, e.g., network access node **2002,** that specifies the available or multiple channel instances and the physical channel configurations of each available or multiple channel instance. Network access node **2002** may transmit such channel configuration information in a broadcast format, such as with system information (e.g., SIB) or as a similar broadcast message. For example, in the setting of FIG. **20,** the channel configuration information may specify the available multiple channel instances. The channel configuration may also specify the radio access technology and the radio resources allocated for each channel instance. Additionally, to allow terminal devices to evaluate each of the channel instances, network access node **2002** may provide further information detailing the specific characteristics of each channel instance, such as the power-efficiency, reliability, and latency of each channel instance.

Controller **1610** may therefore be able to identify each of the channel instances in **2310** from the channel configuration information. Controller **1610** may then select a channel instance in **2320.** The type of channel instance selected by controller **1610** may depend on what type of controller **1610** is executing method **2300** to select. For example, controller **1610** may select a random access channel instance to perform RACH procedures, a control channel instance to transmit or receive control information, a paging channel instance in order to monitor for idle mode paging messages, a traffic data channel instance to transmit or receive traffic data on, etc.

In **2320,** as there may be multiple channel instances specified for each channel type, controller **1610** may evaluate the channel instances based on a current operational profile of terminal device **1502** in order to select a channel instance from the multiple channel instances. For example, controller **1610** may determine the current operational profile of terminal device **1502** in **2320** based on a power efficiency requirement, a reliability requirement of a data connection, and/or a latency requirement of terminal device **1502.** As another example, as previously indicated different types of terminal devices may serve different types of applications, and may consequently have varying power-efficiency, latency, and reliability requirements. Non-limiting examples introduced above include terminal devices for IoT applications (extreme power efficiency requirements with less importance on latency and reliability), terminal devices for V2X or machine control applications (extreme reliability and low latency requirements), and multi-purpose terminal devices for a variety of user-centric applications (higher power-efficiency requirements, but not to the level of extreme power efficiency requirements). Other types of devices and types of supported applications may also influence the power-efficiency, reliability, and latency requirements of terminal device **1502.**

Controller **1610** may therefore select the operational profile of terminal device **1502** based on the power-efficiency, reliability, and latency requirements of terminal device **1502,** which may in turn depend on the type of terminal device and types of applications supported by terminal device **1502.** In some aspects, one or more of the power-efficiency, reliability, or latency requirements of terminal device **1502** may be preprogrammed into controller **1610.**

In some aspects, the operational profile may be preprogrammed into controller **1610.** For example, if terminal device **1502** is an IoT application terminal device, an operational profile (that prioritizes power-efficiency) and/or power-efficiency, latency, and reliability requirements of terminal device **1502** may be preprogrammed into controller **1610.** Similarly, if terminal device **1502** is a multi-purpose or V2X/machine control terminal device, the corresponding operational profile and/or power-efficiency, latency, and reliability requirements may be preprogrammed into controller **1610.** Controller **1610** may therefore reference the preprogrammed operational profile and/or power-efficiency, latency, and reliability requirements in **2320** to identify the operational profile.

In some aspects, the applications served by terminal device **1502** may vary over time. For example, multi-purpose terminal devices may execute different applications depending on user interaction. Other types of terminal devices may also execute different applications over time. Accordingly, in some aspects the power-efficiency, latency, and reliability requirements of terminal devices may change over time. Controller **1610** may therefore also evaluate the current applications being executed by terminal device **1502,** in particular those that rely on network connectivity. Accordingly, controller **1610** may consider the current connection requirements, e.g., latency and reliability, of terminal device **1502** in **2320** as part of the operational profile. For example, if terminal device **1502** is a multi-purpose terminal device that is currently executing real-time gaming application, terminal device **1502** may have strict latency requirements. If terminal device **1502** is a multi-purpose terminal device that is executing a voice call, terminal device **1502** may have important power-efficiency requirements. Other cases may similarly yield connection requirements (e.g., latency and reliability requirements) for terminal device **1502.** In some aspects, controller **1610** may interface with an application processor (data source **1612**/data sink **1616)** running applications (e.g., via Attention (AT) commands) in order to identify the current connection requirements of applications being executed by terminal device **1502.** In some aspects, controller **1610** may consider other factors in determining the operational profile, such as e.g., whether a user has provided user input that specifies a power-efficiency, latency, or reliability requirement. In a non-limiting example, a user may activate a power-saving mode at terminal device **1502,** which may indicate stricter power-efficiency requirements of terminal device **1502.**

Accordingly, depending on the current power efficiency, latency, and reliability requirements of terminal device **1502,** controller **1610** may determine the operational profile. Controller **1610** may then evaluate the multiple channel instances in **2320** based on the operational profile in order to identify a channel instance that best matches the operational profile. According to an exemplary aspect, controller **1610** may therefore evaluate the multiple channel instances based on power efficiency, latency, and reliability in **2320** in order to identify a channel instance that matches the operational profile.

Controller **1610** may thus apply predetermined evaluation logic to each of the multiple channel instances in order to identify which channel instances meet the power efficiency, reliability, and latency requirements as characterized by the operational profile. Accordingly, based on the physical channel configuration for each channel instance, controller **1610** may identify which channel instances are power-efficient, which channel instances are low-latency, and which channel instances are high-reliability. Using predetermined evaluation logic, controller **1610** may identify in **2320** which channel instances match the demands of the operational profile of terminal device **1502.**

For example, in an exemplary scenario, controller **1610** may be performing method **2300** to identify a paging channel instance for the radio access network of radio communication network **2000.** Controller **1610** may determine in **2320** that the operational profile of terminal device **1502** requires power efficiency. Accordingly, in **2320** controller **1610** may evaluate the multiple paging channel instances PCH1, PCH2, PCH3, and PCH4 to identify which paging channel provides power efficiency. Controller **1610** may therefore evaluate the physical channel configuration information of each of PCH1, PCH2, PCH3, and PCH4 to identify which paging channel instance is the most power efficient.

If controller **1610** considers the third radio access technology (supported by network access node **2006)** to be the most power efficient, controller **1610** may select PCH4 as a paging channel instance in **2320.** Alternatively, controller **1610** may determine that the physical channel configuration of PCH2 is the most-power efficient in **2320,** such as based on the periodicity and time-frequency resource distribution of the physical channel configuration.

In another exemplary scenario, controller **1610** may be applying method **2300** to select a control channel instance and may determine in **2320** that the operational profile of terminal device **1502** requires low-latency, such as due to an active data connection that has high latency sensitivity. Controller **1610** may thus evaluate the physical channel configurations of the multiple channel instances in **2320** to identify which channel instance provides low latency, e.g., by identifying that CCH1 has lower latency than CCH2. Controller **1610** may thus select CCH1 in **2320.**

Numerous such evaluation results are possible. In some aspects, the evaluation logic used by controller **1610** in such decisions in **2320** may be preprogrammed at controller **1610,** e.g., as software-defined instructions. In some aspects, controller **1610** may additionally employ machine learning based on historical data to identify which physical channel configurations provide power-efficiency, low latency, and high reliability. Nonlimiting examples of machine learning techniques that controller **1610** can utilize include supervised or unsupervised learning, reinforcement learning, genetic algorithms, rule-based learning support vector machines, artificial neural networks, Bayesian-tree models, or hidden Markov models. Without loss of generality, in some aspects power-efficient channel configurations may have a smaller set of time-frequency resources (thus requiring less processing), be condensed in time and/or have longer transmission time periods (e.g., Transmission Time Intervals (TTI) in an exemplary LTE setting), which may enable longer time periods where radio components can be deactivated and/or powered down, and/or have a longer period (thus allowing for infrequent monitoring and longer periods where radio components can be deactivated and/or powered down). For example, in an exemplary LTE setting, for PDCCH and PDSCH, a shorter TTI can also mean that the signaling overhead for the scheduling of UL/DL grants will increase. For example, instead of scheduling always one full subframe (e.g., 2 consecutive time slots, or 1 ms) for the same terminal device, the network access node may be allowed to schedule single time slots (e.g., equivalent to 0.5 ms). Due to the finer granularity, the network access node may need more bits to describe which resources are assigned to the terminal device within the subframe (if the PDCCH is still included in the OFDM symbols 1 to 3 only). Alternatively, in some aspects there could be a PDCCH for the first time slot in OFDM symbols 1 and 2, and an additional PDCCH in OFDM symbols 8 and 9. For the terminal device this could mean in both cases that it needs to process more PDCCH information to determine whether the eNB has scheduled DL or UL resources for it.

In some aspects, a power-efficient channel configuration of a downlink traffic channel (TCH) may introduce a delay between the time slot carrying control information that indicates that the network access node has scheduled a downlink transmission and the time slot carrying the actual downlink transmission. For example, if the control information occurs immediately prior to the time slot carrying the downlink transmission, a terminal device may receive, store, and process the downlink transmission while simultaneously checking the control information to determine whether the downlink transmission is addressed to the terminal device. An exemplary case of this is the PDCCH followed by the PDSCH in LTE, where a terminal device may store and process the PDSCH while concurrently decoding the PDCCH to check if any of the PDSCH is addressed to the terminal device (e.g., a DCI addressed to the terminal device with an RNTI). A power efficient channel configuration may therefore add a delay between the control information and the downlink transmission, which may provide terminal devices with more time to receive and decode the control information before the downlink transmission starts. A terminal device may therefore be able to determine whether the downlink transmission is addressed to the terminal device at an earlier time (potentially prior to the start of the downlink transmission), and may consequently save power by avoiding the reception, storage, and processing of the downlink transmission in the window between reception of the control information and decoding of the control information. This power-efficient channel configuration may in some aspects increase power efficiency but increase latency. For example, in an exemplary LTE setting, for the DL, when the PDCCH of subframe ’n’ indicates a DL transmission for a first terminal device, then the first part of this DL data is already included in subframe ’n’. As it takes time for the first terminal device to process the PDCCH, the first terminal device may be forced to always receive, store and process (up to a certain degree) the full resource block. If there is a sufficient delay between PDCCH and associated DL transmission, the first terminal device will only process the OFDM symbols including the PDCCH - and the OFDM symbols including the reference symbols (RSs). (The UE can use the RSs to perform a channel estimation for the RB, which may be a pre-requisite for decoding the PDCCH.) If the PDCCH is included in e.g., the first 3 OFDM symbols (which may also include some RSs), and that further RSs are included in the 3 additional OFDM symbols 5, 8 and 12, the first terminal device may normally only process 6 OFDM symbols out of the 14 OFDM symbols of a subframe. Only if the PDCCH in subframe "n" indicates a DL transmission for the first terminal device in subframe "n+k", then the first terminal device will process all OFDM symbols of that subframe "n+k". E.g., for the subframes which do not include data for the first terminal device, the first terminal device can ignore 8/14 = 57% of the OFDM symbols and save processing energy accordingly. This may increase power efficiency but also increase the latency for DL transmissions.

In some aspects, low latency channel configurations can reduce latency by having shorter transmission time periods, such as from e.g., 1 ms to 0.5 ms (where other reductions are similarly possible depending on the initial length of the transmission time period). This may provide a finer 'grid' of potential transmission times, and consequently may enable transmissions to begin earlier in time. This may also reduce round trip time. For example, in an exemplary LTE setting the TTI could be reduced from 1 subframe (= 1ms) to half a subframe (= 0.5 ms) or even lower values (e.g., 2 OFDM symbols = 0.14 ms). If transmissions can start every 0.5 ms, this can reduce latency (and round-trip time). In some aspects, there may be issues regarding where to put the "additional" PDCCH for the lower TTI, so that "low latency" channels and "power efficient" channels can coexist on the same resource grid. E.g., one could define "low TTI subframes" and "normal TTI subframes". In all subframes, OFDM symbols 1 to 3 carry the PDCCH which can be read and understood by all UEs. Low TTI subframes carry an additional PDCCH for the second half of the subframe in OFDM symbol 8 and 9, maybe only on certain RBs. The network access node can then schedule low TTI subframes and normal TTI subframes dependent on the scheduling requests from the terminal devices. For example, the network access node could occasionally insert a normal TTI subframe during which only "power efficient" terminal devices are scheduled. Or it could schedule transmissions for "power efficient" terminal devices for certain RBs (e.g., in a certain sub-band), and additionally, using the additional PDCCH, for the "low latency" terminal devices it schedules transmissions in the remaining sub-band.

In some aspects, low-latency channel configurations may reduce latency by reducing the delay between uplink transmission grants (granting permission for a terminal device to transmit) and the actual starting time of the uplink transmission. By enabling terminal devices to transmit at an earlier time following an uplink transmission grant, terminal devices may transmit information sooner in time, thus reducing latency. For example, in an exemplary LTE setting, delay between UL grant (given on the PDCCH in subframe 'n') and the actual start of the UL transmission in subframe 'n+k' can be reduced. As k is conventionally fixed to 4, e.g., 4 ms after the UL grant, 'k' could be reduced e.g., to '2' or '1' to reduce latency. This may involve modification on the terminal side to support this.

In some aspects, high reliability channel configurations may utilize a robust physical modulation scheme, where e.g., Binary Phase Shift Keying (BPSK) can be more robust than Quadrature Phase Shift Keying (QPSK), 16-Quadrature Amplitude Modulation (16-QAM), 64-QAM, 256-QAM, etc. In some aspects, high reliability channel configurations may send the same information repeatedly, where e.g., the repetition can occur spread over time (e.g., TTI bundling), spread over several frequencies at the same time, or spread over time and over different frequencies (e.g., frequency hopping). In some aspects, high reliability channel configurations can spread the information contained in a single bit over several coded bits by using different coding schemes, such as e.g., convolutional coding. Error correcting codes can then be used on the receiving side of the high-reliability channel configuration to detect and repair (to a certain degree) transmission errors. This may increase reliability at the expense of increased latency.

In addition to the aforementioned exemplary operational profile factors of power efficiency, latency, and reliability, controller **1610** may similarly consider any one or more factors related to Quality of Service (QoS), QoS Class Identifier (QCI), Power Saving Mode (PSM), extended DRX (eDRX), Vehicle-to-Any (V2X), etc.

As the operational profile of terminal device **1502** may depend on multiple factors, in various aspects controller **1610** may consider multiple or any combination of factors where various factors may involve tradeoffs with other factors. For example, in some cases power efficient channel instances may generally have higher latency and/or lower reliability. Accordingly, controller **1610** may 'balance' power efficiency vs. latency and/or reliability to select a channel instance in **2320.** In some aspects, controller **1610** may utilize 'target' factor levels in order to perform such balancing. For example, controller **1610** may identify a target latency that is a maximum acceptable latency and/or a target reliability that is a minimum acceptable reliability and may attempt to select a channel instance that minimizes power consumption while still meeting the target latency and/or target reliability. Alternatively, controller **1610** may identify a target power consumption level that is a maximum acceptable battery power consumption and may attempt to select a channel instance that minimizes latency and/or maximizes reliability while still meeting the target power consumption level. Controller **1610** may therefore include such target factor levels in the evaluation logic utilized to select the channel instance in **2320** based on the current operational profile.

Accordingly, in **2330,** based on an evaluation of the channel configuration information of the multiple channel instances in light of a current operational profile, controller **1610** may select a channel instance from the multiple channel instances that best matches the current operation profile of terminal device **1502** in **2320.** Controller **1610** may then transmit and/or receive data to the radio access network with the selected channel instance. In some aspects, controller **1610** may trigger channel evaluation based on current radio conditions, such as when a radio measurement (e.g., signal strength, signal quality, SNR, etc.) falls below a threshold. In some aspects, controller **1610** may trigger channel evaluation periodically, such as with a fixed evaluation period.

Depending on the type of channel instance that controller **1610** is selecting with method **2300,** controller **1610** may notify the radio access network as part of the selection procedure in **2330** of the selected channel instance in order to properly utilize the selected channel instance for transmission or reception. For example, if controller **1610** is selecting a paging channel instance with method **2300,** controller **1610** may notify the radio access network of the selected paging channel instance to enable the radio access network to page terminal device **1502** on the correct channel. Controller **1610** may similarly notify the radio access network if selecting control or traffic data channel instances. Alternatively, there may be channel instances that controller **1610** may not notify the radio access network for, such as selection of a random access channel instance, as terminal device **1502** may be able to unilaterally utilize such channel instances without prior agreement with the radio access network.

Accordingly, in some aspects controller **1610** may be further configured in **2320** to provide the radio access network, e.g., any one of network access nodes **2002-2006,** with a control message that specifies the selected channel instance. For example, if selecting a paging channel with method **2300** controller **1610** may transmit a control message to network access node **2002** that specifies PCH1 as a selected paging channel instance. Network access node **2002** may in certain cases need to verify the selected paging channel instance with a core network component of core network **2008** such a e.g., a Mobility Management Entity (MME). Network access node **2002** may then either accept or reject the selected paging channel instance by transmitting a response, after which controller **1610** may proceed in to, in the case of acceptance, utilize the selected paging channel instance in **2330** (e.g., by monitoring the selected paging channel instance for paging message) or, in the case of rejection, select and propose another paging channel instance to network access node **2002.** In another example, if selecting a control channel with method **2300,** controller **1610** may transmit a control message to network access node **2002** that specifies CCH1 as a selected control channel instance. Network access node **2002** may then accept or reject the selected control channel instance by transmitting a response, after which controller **1610** may proceed to, in the case of acceptance, utilize the selected control channel instance in **2330** (e.g., by receiving control data on the selected control channel instance in the case of downlink or by transmitting control data on the selected control channel instance in the case of uplink).

In some aspects of method **2300,** the radio access network may be able to set-up and provide certain channel instances on demand, e.g., upon request by a terminal device. Controller **1610** may be able to request a specific channel instance in **2320** as opposed to selecting from a finite group of channel instances provided by the radio access network in the channel configuration information. For example, controller **1610** may receive the channel configuration information in **2310** and determine in **2320** that the channel instances specified therein do not meet the current criteria of controller **1610,** such as if controller **1610** is targeting a low-power channel instance and none of the available channel instances meet the low-power criteria. Accordingly, controller **1610** may transmit a control message to the radio access network in **2320** that requests a low-power channel instance. The radio access network may then either accept or reject the requested channel instance. If the radio access network accepts the requested channel instance, the radio access network may allocate radio resources for the request channel instance and confirm activation of the requested channel instance to controller **1610** via a control message. Conversely, if the radio access network rejects the requested channel instance, the radio access network may transmit a control message to controller **1610** that rejects the requested channel instance. In the case of rejection, the radio access network may propose a modified requested channel instance, which controller **1610** may then either accept, reject, or re-propose. Such may continue until a modified requested channel instance is agreed upon or finally rejected. In the case of acceptance, controller **1610** may proceed to **2330** to transmit or receive data with the radio access network with the agreed-upon channel instance. Such requested channel instances may be UE-specific, e.g., accessible only by the requesting terminal device, or may be provided to groups of multiple terminal devices.

As previously described, the various channel instances may be on different radio access technologies, such as in the example of FIG. **20** where the radio access network may provide multiple channel instances on different radio access technologies. For example, controller **1610** may receive the channel configuration from network access node **2002** in **2310** (using the first radio access technology) and select a channel instance to report to network access node **2002** in **2310** where the selected channel instance is provided on a different radio access technology, such as PCH3 provided by network access node **2004.** Accordingly, controller **1610** may monitor the selected paging channel instance in **2330** from network access node **2004.** In other words, the selected channel instance may be on a different radio access technology than the radio access technology used to receive the channel configuration information in **2310** and/or report the selected channel instance in **2330.** Accordingly, upon receipt of a control message from controller **1610** that specifies a selected channel instance provided by a different radio access technology, e.g., PCH3 provided by network access node **2004,** network access node **2002** may accept the selected channel instance with controller **1610** and notify network access node **2004** that terminal device **1502** has selected PCH3 as a paging channel instance (e.g., via an interface between network access node **2002** and network access node **2004**). Network access node **2002** may then provide paging data addressed to terminal device **1502** to network access node **2004,** which network access node **2004** may transmit on PCH3. Controller **1610** may simultaneously monitor PCH3 for paging information and may accordingly be able to receive and process the paging information provided by network access node **2004** on PCH3. The involved network access nodes may need to be interfaced with a common core network mobility entity (e.g., an MME or similar entity) that is responsible for distributing paging at the involved network access nodes. Additional variations with different channel instances (e.g., random access channels, traffic data channels, control channels, etc.) and radio access technologies may similarly apply according to aspects of the disclosure.

In addition to employing a different radio access technology for a selected channel instance, in some aspects controller **1610** may be able to respond on a separate radio access technology in response to data received on the selected channel instance. For example, in the exemplary scenario introduced above where controller **1610** selects PCH3 as a paging channel instance after receiving the channel configuration information from network access node **2002** (with the first radio access technology), controller **1610** may receive a paging message on PCH3 from network access node **2004** (with the second radio access technology) that is addressed to terminal device **1502** and indicates that incoming data is waiting for terminal device **1502.** Controller **1610** may then select to either receive the incoming data from network access node **2004** (e.g., with a traffic data channel instance provided by network access node **2004**) or from a different network access node and/or different radio access technology. For example, controller **1610** may select to receive the incoming data from network access node **2002,** e.g., on a traffic data channel instance provided by network access node **2002.** Accordingly, controller **1610** may respond to the paging message at either network access node **2004** or network access node **2002** (depending on the specifics of the paging protocol) and indicate that the incoming data should be provided to terminal device **1502** on the selected traffic data channel instance. Network access node **2002** may then provide the incoming data to terminal device **1502** on the selected traffic data channel instance. Such may be useful if, for example, the selecting paging channel instance is power-efficient but the selected traffic data channel instance has a higher reliability, latency, link capacity, rate, or quality and thus may be a better alternative for reception of traffic data. In certain aspects, controller **1610** may re-employ method **2300** in order to select a new channel instance, e.g., to select a traffic data channel instance.

In some aspects, terminal device **1502** may employ a special 'low-power' radio access technology to receive paging messages. For example, antenna system **1602,** RF transceiver **1604,** and physical layer processing module **1608** may contain an antenna and RF and PHY components that are low-power and may be activated by an electromagnetic wave (similar to e.g., a Radio Frequency Identification (RFID) system).

FIG. **24** shows an exemplary modified configuration of terminal device **1502** in accordance with some aspects that includes low-power RAT system **2402,** which may include basic reception components such as an antenna and RF transceiver and may interface with controller **1610.** Controller **1610** may utilize low-power RAT system **2402** as a low-power alternative for utilizing channel instances such as paging channel instances. For example, controller **1610** may utilize low-power RAT system **2402** to monitor a low-power paging channel instance. As previously indicated, low-power RAT system **2402** may be activated upon receipt of a particular trigger electromagnetic wave and may therefore not need external power to monitor the low-power paging channel instance. Accordingly, a network access node configured with a counterpart RAT system may be able to provide a paging channel instance to terminal device **1502** by broadcasting the particular trigger electromagnetic wave on the low-power paging channel instance when a paging message is waiting for terminal device **1502.** Low-power RAT system **2402** may then receive trigger electromagnetic wave and 'wake up', thus signaling that a paging message is waiting for terminal device **1502.** Low-power RAT system **2402** may either be configured to then enter an active reception state in order to receive the subsequent paging message on the paging channel instance or instead may signal controller **1610** that a paging message is waiting for terminal device **1502.** If low-power RAT system **2402** is configured to receive the subsequent paging message, low-power RAT system **2402** may receive the paging message and provide the paging message to controller **1610.** If low-power RAT system **2402** is configured to signal controller **1610** that a paging message is waiting for terminal device **1502,** controller **1610** may then receive the indication from low-power RAT system **2402** and proceed to receive the subsequent paging message on another paging channel instance via antenna system **2402.**

In some aspects of this disclosure related to random access channels, controller **1610** may select a random access channel (from multiple available random access channel instances) in **2320** based on various operational status factors including latency requirements, application criticality, or the presence of a 'RACH subscription'. For example, in evaluating the current operation status in **1612,** controller **1610** may identify whether the underlying trigger for random access procedures, e.g., if a particular application requires a data connection, has strict latency requirements or involves critical data. If any of such conditions are true, controller **1610** may aim to select a random access channel instance that offers a low collision probability, e.g., a low likelihood that another terminal device will transmit a similar random access preamble during the same RACH occasion. Accordingly, controller **1610** may aim to select a random access channel instance in **1610** that is not expected to be accessed by a significant number of other terminal devices, thus reducing the collision probability. Controller **1610** may therefore be able to reduce expected latency as RACH transmissions may occur without a high potential for collisions. In some aspects, controller **1610** (or the network access node) may be able to estimate the number of terminal devices that are expected to access the random access channel in a given area by tracking the terminal devices (for example, monitoring uplink interference to estimate the number of proximate terminal devices) and/or by observing traffic patterns (e.g., observing the occurrence of contention in random access procedures).

Additionally, in some aspects terminal device **1502** may have access to a ‘RACH subscription’ in which terminal device **1502** has special access to a random access channel instance that is reserved for only a select group of terminal devices. Access to such a RACH subscription may be limited and may be available as a paid feature, e.g., where a user or other party pays for access to the RACH subscription and in return is guaranteed an improved ‘level of service’.

As the RACH subscription may only available to a select number of terminal devices, the collision probability may be dramatically reduced. In the setting of method **2300** as applied for selecting a random access channel instance, the radio access network may broadcast channel configuration information that specifies the radio resources and scheduling for the RACH subscription, which controller **1610** may receive in **2310** (alternatively, the RACH subscription may be predefined). Controller **1610** may then select the RACH subscription as a random access channel instance in **2320** and proceed to transmit a RACH transmission on the RACH subscription in **2330.** As the subscription RACH may be available to only a limited number of terminal devices, there may only be low collision probability. The radio access network may additionally need to verify access to the subscription RACH with a core network component that interfaces with network access node **2002,** such as a Home Location Register (HLR) or Home Subscriber Service (HSS), which may contain a database of such subscriptions for verification purposes.

According to another aspect of method **2300,** the radio access network may restrict access to certain channel instances based on specifics of each terminal device. The radio access network may therefore provide certain channel instances that are only accessible to terminal devices that meet certain criteria, such as only low-power devices. For example, the radio access network may provide certain channel instances that are only available to devices that report having low battery power. Accordingly, the radio access network may specify in the channel configuration information that certain available channel instances are only accessible by terminal devices with low battery power, e.g., battery power falling below a certain threshold. Terminal devices may then either be expected to obey such requirements or may be required to transmit a control message that explicitly provides the current battery power level. The radio access network may then either permit or deny terminal devices from accessing the restricted channel instances based on such criteria. Other criteria such as data connection requirements, including latency and reliability, for example, may similarly be employed to restrict access to specific channel instances to certain terminal devices. in some aspects, restrictions may be overwritten in certain circumstances. For example, if terminal device **1502** has limited power resources but has high-priority traffic to send (e.g., mission-critical low-latency traffic), terminal device **1502** may transmit the high-priority traffic at the cost of power consumption. For example, if controller **1610** is low on power but has mission-critical low-latency traffic, controller **1610** may transmit the mission-critical low-latency traffic regardless of the power consumption cost.

Accordingly, controller **1610** may utilize method **2300** to select and utilize a channel instance that offers desirable properties such as power efficiency, low latency, high reliability, etc. Controller **1610** may select the channel instance based on a current operation profile of terminal device **1502** that depends on the power efficiency and connection requirements (e.g., latency and reliability) of terminal device **1502**.e.g., Although power-efficiency is relevant to aspects of the disclosure, in some aspects of power, controller **1610** may be able to select channel instances with method **2300** to satisfy any number of desired operational criteria.

As described above, cooperation from the radio access network may be relied on to provide the multiple channel instances.

FIG. **25** shows method **2500** in accordance with some aspects, which may be a counterpart to method **2300** and be executed at a network access node of the radio access network, such as network access node **2002** (or equivalently any network access node of the radio access network).

FIG. **26** shows an internal configuration of an exemplary network access node, such as network access node **2002** in accordance with some aspects, which may be configured to execute method **2500.** As shown in FIG. **26,** network access node **2002** may include antenna system **2602,** radio module **2604,** and communication module **2606** (including physical layer module **2608** and control module **1910**). In an abridged overview of the operation of network access node **2002,** network access node **2002** may transmit and receive radio signals via antenna system **2602,** which may be an antenna array including multiple antennas. Radio module **2604** may perform transmit and receive RF processing in order to convert outgoing digital data from communication module **2606** into analog RF signals to provide to antenna system **2602** for radio transmission and to convert incoming analog RF signals received from antenna system **2602** into digital data to provide to communication module **2606.** Physical layer module **2608** may be configured to perform transmit and receive PHY processing on digital data received from radio module **2604** to provide to control module **2610** and on digital data received from control module **2610** to provide to radio module **2604.** Control module **2610** may control the communication functionality of network access node **2002** according to the corresponding radio access protocols, e.g., LTE, which may include exercising control over antenna system **2602,** radio module **2604,** and physical layer module **2608.** Each of radio module **2604,** physical layer module **2608,** and control module **2610** may be structurally realized as a hardware-defined module, e.g., as one or more dedicate hardware circuits or FPGAs, as a software-defined module, e.g., as one or more processors executing program code that define arithmetic, control, and I/O instructions (e.g., software and/or firmware) stored in a non-transitory computer-readable storage medium, or as mixed hardware-defined and software-defined modules. In some aspects, radio module **2604** may be a radio transceiver including digital and analog radio frequency processing and amplification circuitry. In some aspects, radio module **2604** may be a software-defined radio (SDR) component implemented as a processor configured to execute software-defined instructions that specify radio frequency processing routines. In some aspects, physical layer module **2608** may include a processor and one or more hardware accelerators, wherein the processor is configured to control physical layer processing and offload certain processing tasks to the one or more hardware accelerators. In some aspects, control module **2610** may be a controller configured to execute software-defined instructions that specify upper-layer control functions. In some aspects, control module **2610** may be limited to radio communication protocol stack layer functions, while in other aspects control module **2610** may also be responsible for transport, internet, and application layer functions.

Network access node **2002** may interface with a core network and/or internet networks (directly/via a router or via the core network), which may be through a wired or wireless interface. Network access node **2002** may also interface with other network access nodes, such as network access nodes **2004** and **2006,** over a wired or wireless interface. Network access node **2002** may thus provide the conventional functionality of network access nodes in radio communication networks by providing a radio access network to enable served terminal devices to access desired communication data.

Network access node **2002** may execute method **2500** at control module **2610,** which may utilize antenna system **2602,** radio module **2604,** and physical layer module **2608** to transmit and receive signals. As shown in FIG. **25,** in **2510,** control module **2610** may broadcast channel configuration information that specifies multiple channel instances, which may include channel configuration information for channel instances provided by network access node **2002** in addition to channel instances provided by other network access nodes, such as network access node **2004** and network access node **2006.**

In **2520,** control module **2610** may receive a control message from a terminal device, e.g., terminal device **1502,** that specifies a selected channel instance. As previously indicated, the selected channel instance may be provided at either network access node **2002** or at another network access node, which may or may not be the same radio access technology as network access node **2002.** Accordingly, control module **2610** may identify in **2530** whether the selected channel instance is provided by a different or another network access node and, if so, may proceed to **2550** to notify the selected network access node. In some aspects, this may involve verifying with the selected network access node whether the selected network access node will accept or reject the selected channel instance and reporting such back to terminal device **1502.** If the selected network access node accepts the selected channel instance in **2550,** control module **2610** may report such back to terminal device **1502** (thus allowing terminal device **1502** to begin utilizing the selected channel instance). Conversely, if the selected network access node rejects the selected channel instance in **2550,** control module **2610** may report the rejection to terminal device **1502** and potentially handle further relay of information between terminal device **1502** and the selected network access node to negotiate a new selected channel instance or a modified selected channel instance.

If the selected channel instance is provided by network access node **2002,** control module **2610** may proceed to **2540** to accept or reject the selected channel instance (which may include negotiating a new or modified selected channel instance in the case of an initial rejection). Control module **2610** may determine whether terminal device **1502** is authorized to access the selected channel instance in **2540.** If control module **2610** accepts the selected channel instance in **2540,** control module **2610** may proceed to **2560** to transmit or receive data with terminal device **1502** with the selected channel instance. As previously indicated, such may include transmitting or receiving traffic or control data with terminal device **1502** on a selected traffic or control channel instance, providing paging messages to terminal device **1502** on a selected paging channel instance, etc. Conversely, if control module **2610** rejects the selected channel instance, control module **2610** may notify the terminal device of the rejection of the selected channel instance in **2570.** The terminal device may then select another channel instance and transmit a control message specifying a new channel instance, which control module **2610** may receive in **2520** and continue with the rest of method **2500.**

Furthermore, as indicated above regarding random access channel instances, in some aspects terminal devices may be able to unilaterally utilize random access channels, and may not transmit a control message specifying a selected random access channel instance. Instead, terminal devices may select a random access channel instance and proceed to utilize the random access channel instance. If the selected random access channel instance is not restricted (e.g., not a RACH subscription), control module **2610** may receive and process the RACH transmission on the selected random access channel instance as per conventional procedures. However, if the selected random access channel instance is restricted (e.g., is a RACH subscription), control module **2610** may, upon receipt of a RACH transmission on the selected random access channel instance, verify whether the transmitting terminal device is authorized to utilize the selected random access channel instance. If the transmitting terminal device is authorized to utilize the selected random access channel instance, control module **2610** may proceed as per conventional random access procedures. If the transmitting terminal device is not authorized to utilize the selected random access channel instance, control module **2610** may either ignore the RACH transmission or respond with a control message specifying that the transmitting terminal device is not authorized to utilize the selected random access channel instance.

As described above regarding FIGs. **23** and **24,** in some aspects the radio access network may provide channel configuration information in a 'broadcast format', e.g., by broadcasting channel configuration information for the multiple channel instances to all nearby terminal devices. Additionally or alternatively to such a broadcast scheme, in some aspects network access nodes such as network access node **2002** may provide channel configuration information in response to queries from requesting terminal devices such as terminal device **1502.**

FIG. **27** shows method **2700** which control module **2610** may in some aspects execute at network access node **2002** in order to respond to queries for channel configuration information from terminal devices. As shown in FIG. **27,** control module **2610** may receive a request for channel configuration information from controller **1610** of terminal device **1502** in **2710.** The request may be a general request for channel configuration information for all channel instances, a request for channel configuration information for specific channel instances, or a request for channel configuration information for channel instances depending on a specified operational profile.

Control module **2610** may then select one or more channel instances from the available channel instances provided by the radio access network in **2720,** e.g., PCH1, PCH2, PCH3, PCH4, RACH1, RACH2, CCH1, and CCH2. If the request received in **2710** is a general request for channel configuration information for all available channel instances, control module **2610** may simply select all available channel instances in **2720.** If the request received in **2710** is a request for channel configuration information for specific channel instances, control module **2610** may select channel instances matching the specified channel instances in **2720.** For example, the request may be for channel instances of a specific channel type, such as one or more of paging channel instances, random access channel instances, traffic data channel instances, or control channel instances, such as if controller **1610** is applying method **2300** in order to select a specific type of channel instance and may transmit the request in **2710** to request channel configuration information for the specific type of channel instance. Control module **2610** may then select channel instances matching the specific types of channel instances in **2720.**

Alternatively, if the request received in **2710** is a request for channel configuration information for channel instances depending on a specified operational profile, controller **1610** may have transmitted a request in **2710** that specifies an operational profile for terminal device **1502** determined by controller **1610** (e.g., in **2320** as described above). Accordingly, the operational profile may indicate one or more of power efficiency requirements, latency requirements, or reliability requirements of terminal device **1502.** Control module **2610** may then select one or more channel instances in **2720** that match the operational profile specified by controller **1610,** such as using a similar or same procedure as described regarding controller **1610** in **2320** of method **2300,** e.g., with preconfigured evaluation logic to identify channel instances with channel configurations that match a particular operational profile. Accordingly, in such cases control module **2610** may perform the operational profile-based evaluation of channel instances (as opposed to controller **1610** as previously described). Control module **2610** may either identify a single channel instance (e.g., a 'best match' based on the operational profile) or a group of channel instances (e.g., a group of 'best matches' based on the operational profile).

Control module **2610** may thus select one or more channel instances based on the channel configuration information request in **2720.** Control module **2610** may then collect the channel configuration information for the selected one or more channel instances and transmit a response to terminal device **1502** containing the channel configuration information in **2730.**

Accordingly, controller **1610** may receive the response containing the channel configuration information after transmission by network access node **2002.** Controller **1610** may then select a channel instance based on the provided channel configuration information. If the initial channel configuration information request was a general request for channel configuration information for all available channel instances or for channel instances of a specific type, controller **1610** may select a channel instance from the specified channel instances based on the channel configuration information and the operational profile of terminal device **1502** (as previously described regarding **2320,** e.g., using preconfigured evaluation logic). If the initial channel configuration information request included an operational profile, controller **1610** may utilize the channel instance specified by network access node **2002** as the selected channel instance (if control module **2610** provided only one channel instance based on the operational profile; controller **1610** may then proceed to **2330** to utilize the selected channel instance). Controller **1610** may alternatively evaluate the specified channel instances in order to select which of the specified channel instances best matches the operational profile of terminal device **1502** (and then proceed to **2330** to utilize the selected channel instance).

FIG. **28** shows message sequence chart **2800** illustrating an exemplary operational flow according to some aspects. As shown in FIG. **28,** network access node **2002** may broadcast system information in **2802** (e.g., as SIBs) that specify the current physical channel configuration information for the active channel instances. Terminal device **1502** may then determine the current power efficiency and connection requirements of terminal device **1502** in **2802,** which may include identifying applications being executed at terminal device **1502.** For example, an application processor of terminal device **1502** (at data source **1612**/data sink **1616**) may be executing mobile application 1, mobile application 2, and mobile application 3, which may have different latency, reliability, and power-efficiency requirements. Terminal device **1502** may collect such information in addition to a current power level of power supply **1618** in **2804.** Terminal device **1502** may then determine an operational profile of terminal device **1502** in **2806** and provide the operational profile to a mobility control entity (e.g., an MME) of core network **2008** in the form of an attach request.

The mobility control entity may then decide whether to accept or reject the attach request. Optionally, in some aspects the mobility control entity may decide that a channel instance needs to be activated or reconfigured. For example, the mobility control entity may determine that terminal device **1502** should utilize a specific channel (e.g., RACH2) but that the channel instance has not been activated yet (e.g., by network access node **2002**) or is not configured correctly. The mobility control entity may then instruct the network access node responsible for the channel instance (e.g., network access node **2002**) to activate or reconfigure the channel instance in **2810.**

The mobility control entity may then accept the attach request in **2812** with an attach accept. The attach accept may specify which channel instances terminal device **1502** should utilize (e.g., PCH1, PCH2, RACH2, PCCH2), where the attach accept may also provide different options of channel instances for terminal device **1502** to utilize (e.g., a choice between PCH1 and PCH2). If options are presented to terminal device **1502,** terminal device **1502** may select a preferred or supported channel instance in **2814** (e.g., may select PCH2). Terminal device **1502** may then complete the attach by transmitting an attach complete in **2816,** which may specify a selected channel instance (e.g., PCH2, in response to which the MME may instruct network access node **2002** to page terminal device **1502** only on PCH2).

FIG. **29** shows method **2900** of operating a terminal device in accordance with some aspects. As shown in FIG. **29,** method **2900** includes identifying an operational profile of the terminal device based on a power requirement or a connection requirement of the terminal device (**2910**), selecting a channel type from a plurality of channel types (**2920**), identifying, based on the operational profile, a physical channel configuration for the channel type from a plurality of physical channel configurations associated with a radio access network (**2930**), and transmitting or receiving data according to the physical channel configuration (**2940**).

FIG. **30** shows method **3000** of operating one or more network access nodes of a radio access network in accordance with some aspects of the disclosure. As shown in FIG. **30,** method **3000** includes providing a plurality of physical channel configurations of a specific channel type over the radio access network (**3010**), wherein the specific channel type is a traffic data channel, a control channel, a random access channel, or a paging channel, receiving a request to utilize a first physical channel configuration of the plurality of physical channel configurations from a terminal device (**3020**), and transmitting data to the terminal device or receiving data from the terminal device according to the first physical channel configuration (**3030**).

Accordingly, various aspects of the disclosure may rely on cooperation between a radio access network and terminal devices in order to provide multiple channel instances for use by terminal devices. Terminal devices may therefore have the option to select between multiple channel instances of the same type of channel, thus enabling terminal devices to select channel instances dependent on a current operational profile of the terminal device that may be based on a number of factors such as power efficiency, low latency, reliability, probability, etc. The channel instances may be provided on different radio access technologies (where the various network access nodes may be interfaced and thus considered part of the same radio access network), which may accordingly enable terminal devices to select channel instances provided by desired radio access technologies.

2.2 Power-Efficiency #2

In accordance with another aspect of the disclosure, power, terminal device **1502** may optimize random access transmissions in order to conserve power. As previously described, terminal device **1502** may utilize random access procedures when establishing a connection with a network access node (e.g., transitioning from idle mode to connected mode or after an Out-of-Coverage (OOC) scenario), during handover to a network access node, or if timing synchronization is lost with a network access node (although other scenarios may trigger random access procedures depending on RAT-specific protocols). Accordingly, controller **1610** may identify the random access channel (e.g., PRACH in the case of LTE), including the timing and frequency resources allocated to the random access channel, and generate a random access preamble uniquely identifying terminal device **1502** (which controller **1610** may trigger at physical layer processing module **1608**), and transmit a random access transmission containing the random access preamble on the radio resources allocated for the random access channel.

The target network access node, e.g., network access node **2002** without loss of generality, may monitor the random access channel for random access transmissions. Control module **2610** may therefore receive and decode random access transmissions (e.g., at physical layer module **2608**) in order to identify random access preambles that identify terminal devices performing random access procedures. Control module **2610** may therefore decode and identify terminal device **1502** based on reception and identification of the random access transmission and may proceed to establish a connection with terminal device **1502** as per conventional random access procedures (which may vary based on RAT-specific protocols).

In order to allow network access node **2002** to successfully receive and process random access transmissions, terminal device **1502** may need to utilize a sufficient transmission power. If terminal device **1502** utilizes an insufficient transmission power, control module **2610** may not be able to correctly decode the random access preamble and random access procedures with terminal device **1502** may fail. However, random access transmission power may also be limited at terminal device **1502** by battery power constraints. For example, the use of a high random access transmission power may have a high battery power penalty.

According to an aspect of this disclosure, controller **1610** may utilize an 'optimal' random access transmission power that utilizes a minimum transmit power to achieve a target 'single shot RACH success rate' e.g., the rate at which a single random access transmission is successful. Controller **1610** may therefore balance transmission power and battery power usage with RACH success rate by using an optimal random access transmission power. A nonlimiting and exemplary target RACH success rate would be 95%; in other words, the probability of more than 2 RACH attempts is <1e-3. For this exemplary target RACH success rate, less than 1 out of 1000 LTE handover procedures with network timer T304 set to 50ms (enough time for 2 RACH attempts) would fail.

FIG. **31** shows method **3100** according to some aspects, which controller **1610** may execute (via antenna system **1602,** RF transceiver **1604,** and physical layer processing module **1608)** in order to perform random access procedures. Although described below in an exemplary LTE setting, controller **1610** may analogously perform method **3100** for random access procedures of any radio access technology according to the corresponding RAT-specific protocols. As shown in FIG. **31,** controller **1610** may first in **3110** identify the random access channel of a target network access node, e.g., network access node **2002** without loss of generality. In an exemplary setting of LTE, controller **1610** may receive an SIB2 message from network access node **2002** and identify the PRACH configuration index in order to identify the random access channel. Controller **1610** may then generate a random access preamble that identifies terminal device **1502** in **3120,** where the specific format of the random access preamble may be RAT-specific.

Following random access preamble generation, controller **1610** may select a random access transmission power based on a current operation status of terminal device **1502** in **3130.** Accordingly, controller **1610** may attempt to select a random access transmission power that optimally balances between battery penalty and RACH success rate. In particular, controller **1610** may apply an algorithm in **3130** in order to determine the random access transmission power based on the current operation status, where the algorithm relies on status factors such as power-efficiency requirements, connection requirements, network environment data (e.g., radio measurements, cell load metrics, etc.), collision probability, current battery consumption rates, and current battery power level. Controller 1610 may thus input such quantitative factors to the algorithm in order to determine a random access transmission power that produces a target RACH success rate. The algorithm may thus output a random access transmission power that provides an 'optimum' transmission power, e.g., results in a minimum amount of energy being consumed by terminal device **1502** in order to perform a successful RACH procedure.

In some aspects, the algorithm employed by controller **1610** to select the random access transmission power in **3130** may be based on historical trace log data and modem power consumption data. Accordingly, the algorithm may be developed using offline training that considers data that characterizes power consumption and RACH success,, for example supervised machine learning algorithms, like support vector machines, artificial neural networks or hidden Markov models may be trained with historical trace log data captured during regular inter-operability lab testing and field testing at cellular modem development time. The historical data may cover both cell center and cell edge conditions in order to accurately reflect a wide range of mobility scenarios. The algorithm may therefore learn how the aforementioned factors of data connection latency requirements, network environment data (e.g., radio measurements, cell load metrics, etc.) collision probability, current battery consumption rates, and current battery power level interact based on the historical data and may accordingly be able to effectively determine random access transmission powers that considers such factors. The algorithm may additionally employ runtime machine learning in order to adapt random access transmission powers based on actual observations of successful and unsuccessful random access transmissions, for example the random access transmission power level for the next random access attempt may be determined with supervised or unsupervised machine learning algorithms such as reinforcement learning, genetic algorithms, rule-based learning support vector machines, artificial neural networks, Bayesian-tree models, or hidden Markov models as a one-step ahead prediction based on actual observations of successful and unsuccessful random access transmissions and the aforementioned factors of data connection latency requirements, network environment data (e.g., radio measurements, cell load metrics, etc.) collision probability, current battery consumption rates, and current battery power level over a suitable past observation window.

After completion of **3130,** controller **1610** may transmit a random access transmission to network access node **2002** that contains the random access preamble with the selected random access transmission power in **3140.** Controller **1610** may then proceed with the random access procedure as per convention. Assuming that the selected random access transmission power was sufficient and no contention or collisions occurred, network access node **2002** may be able to successfully receive and decode the random access transmission to identify terminal device **1502** and proceed to establish a connection with network access node **2002.**

2.3 Power-Efficiency #3

According to another aspect of this disclosure, terminal device **1502** may utilize a hardware configuration that enables scheduling-dependent activation or deactivation of certain hardware components. For example, the hardware design of terminal device **1502** (particularly e.g., physical layer processing module **1608)** may be 'modularized' so that hardware components dedicated to specific functions, such as channel measurement, control channel search, and beamforming tracking hardware, may be deactivated during periods of inactivity. The radio access network may cooperate by utilizing specific scheduling settings that will allow terminal device **1502** to maximize power savings by frequently powering down such components. Although not limited to any particular RAT, aspects of the disclosure may be particularly applicable to LTE and 5G radio access technologies, such as millimeter wave (mmWave) other 5G radio access technologies.

As noted above, modularization may be particularly applicable for physical layer processing module **1608.** As opposed to many protocol stack layer (Layers 2 and 3) tasks, most physical layer tasks may be highly processing-intensive and thus may be more suited to hardware implementation, such as in the form of dedicated hardware such as ASICs. Accordingly, physical layer processing module **1608** may be implemented as multiple different physical layer hardware components that are each dedicated to a unique physical layer task, such as control channel search, radio channel measurements, beamtracking, and a number of other similar functions. FIG. **32** shows an exemplary internal configuration of physical layer processing module **1608,** which may include control channel search module **3202,** channel measurement module **3204,** beamtracking module **3206,** and PHY controller 3208. Although not explicitly shown in FIG. **32,** physical layer processing module **1608** may include a number of additional hardware and/or software components related to any one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc.

PHY controller **3208** may be implemented as a processor configured to execute program code for physical layer control logic software stored in a non-transitory computer readable medium (not explicitly shown in FIG. **32**). Accordingly, PHY controller **3208** may control the other various components of physical layer processing module **1608** to perform the appropriate physical layer processing functions for both uplink data received from controller **1610** and provided to RF transceiver **1604** and downlink data received from RF transceiver **1604** and provided to controller **1610.**

In contrast to the software implementation of PHY controller **3208,** each of control channel search module **3202,** channel measurement module **3204,** and beamtracking module **3206** may be implemented as hardware, such as an application-specific circuit (e.g., an ASIC) or reprogrammable circuit (e.g., an FPGA). Control channel search module **3202,** channel measurement module **3204,** and beamtracking module **3206** may in some aspects also include software components. Further, each of control channel search module **3202,** channel measurement module **3204,** and beamtracking module **3206** may be 'modularized' and therefore may be able to be independently operated and activated. Accordingly, any one of control channel search module **3202,** channel measurement module **3204,** and beamtracking module **3206** may be activated/deactivated and powered up/down independent of any other components of physical layer processing module **1608.** Channel search module **3202,** channel measurement module **3204,** and beamtracking module **3206** may be located in different physical chip areas of physical layer processing module **1608** to allow for entire areas of the chip to be turned off. In some aspects, one or more of control channel search module **3202,** channel measurement module **3204,** and beamtracking module **3206** may have different activation levels, such as varying levels of idle, sleep, and active states. Accordingly, PHY controller **3208** may be configured to independently control one or more of control channel search module **3202,** channel measurement module **3204,** and beamtracking module **3206** to operate at these different activation levels.

PHY controller **3208** may trigger activation and operation of control channel search module **3202,** channel measurement module **3204,** and beamtracking module**3206** according to the physical layer protocols for the relevant radio access technology. For example, where PHY controller **3208,** control channel search module **3202,** channel measurement module **3204,** and beamtracking module **3206** are designed for LTE operation, PHY controller **3208** may trigger activation and operation of control channel search module **3202,** channel measurement module **3204,** and beamtracking module **3206** according to LTE physical layer protocols for an LTE radio access connection handled by physical layer processing module **1608.** Accordingly, PHY controller **3208** may trigger operation of control channel search module **3202** when control channel data processing is received (e.g., for PDCCH search), operation of channel measurement module **3204** when channel measurement is called for (e.g., to perform reference signal measurements such as Cell-Specific Reference Signal (CRS) and other reference signal occasions), and operation of beamtracking module **3206** when periodic beamtracking is called for to support beamforming communications (e.g., for mmWave or massive MIMO systems These aspects can be used with common channel aspects, e.g., a common channel utilizing a hardware configuration that enables scheduling-dependent activation or deactivation of certain hardware components.**0818**). Accordingly, depending on the flow of an LTE connection supported by physical layer processing module **1608,** PHY controller **3208** may trigger operation of any of control channel search module **3202,** channel measurement module **3204,** and beamtracking module **3206** at varying points in time.

PHY controller **3208** may deactivate and/or power power-down control channel search module **3202,** channel measurement module **3204,** and beamtracking module **3206** during respective periods of inactivity for each module. This may be done to reduce power consumption and conserve battery power (e.g., at power supply **1618**). Accordingly, PHY controller **3208** may deactivate and/or power down control channel search module **3202** (e.g., when there is no control channel data to decode, such as during the time period after each PDCCH has been decoded and before the next PDCCH in LTE), channel measurement module **3204** (e.g., when there is no signal to perform channel measurement on, such as during time periods when no reference signals are received), and beamtracking module **3206** (e.g., when beamtracking is not needed, such as during time periods in between periodic beamtracking occasions).

Physical layer processing module **1608** may minimize power consumption by powering down components such as control channel search module **3202,** channel measurement module **3204,** and beamtracking module **3206.** According to an exemplary aspect, the physical layer processing module **1608** may power down the components (e.g., as often as possible.). However, scheduling of the radio access connection supported by physical layer processing module **1608** may dictate when such power-downs are possible. For example, PHY controller **3208** may need to activate control channel search module **3202** for the control region (PDCCH symbols) of LTE subframes in order to decode the control data, which may limit the occasions when PHY controller **3208** can power down control channel search module **3202.** Likewise, PHY controller **3208** may only be able to power down channel measurement module **3204** and beamtracking module **3206** during time periods when the scheduling of the radio access connection channel does not require channel measurement and beamtracking, respectively.

In accordance with an exemplary aspect of this disclosure, the radio access network may utilize specialized scheduling to enable terminal device **1502** to implement power saving measures more frequently. For example, the specialized scheduling may limit periods when operation of dedicated hardware such as control channel search module **3202,** channel measurement module **3204,** and beamtracking module **3206** is necessary and accordingly may allow PHY controller **3208** to conserve power by frequently powering down such components. In some aspects, PHY controller **3208** may utilize a machine learning technique such as supervised or unsupervised learning, reinforcement learning, genetic algorithms, rule-based learning support vector machines, artificial neural networks, Bayesian-tree models, or hidden Markov models to determine when and to what extent to implement the power saving measures. In some aspects, PHY controller **3208** may continuously learn and/or update the scheduling of the power saving measures.

FIG. **33** shows method **3300,** which may be executed at a terminal device e.g., terminal device **1502,** and a network access node e.g., network access node **2002.** Although the following description of FIG. **33** may explicitly reference LTE, this description is demonstrative and method **3300** may be analogously applied for any radio access technology.

Terminal device **1502** may employ method **3300** to utilize specialized scheduling settings with cooperation from the radio access network. In the setting of method **3300,** terminal device **1502** may utilize a 'battery power class' scheme in order to indicate a current battery power level to network access node **2002,** in response to which network access node **2002** may assign terminal device **1502** a scheduling setting dependent on the battery power class. Battery power classes that indicate low battery power may prompt network access node **2002** to assign more power efficient scheduling settings to terminal device **1502.**

Accordingly, in process**3302** controller **1610** may identify a battery power class of terminal device **1502.** For example, controller **1610** may monitor power supply **1618** to identify a current battery power level of power supply **1618,** which may be e.g., expressed as a percentage or a watt-hours level. Controller **1610** may then determine a battery power class based on the current battery power level, where the battery power class scheme may have a predefined number of battery power classes that are each assigned to a range of battery power levels. For example, a four-level battery power class scheme may have a first battery power class for battery power levels between 100-90%, a second battery power class for battery power levels between 90-50%, a third battery power class for battery power levels between 50-30%, and a fourth battery power class for battery power levels between 30-0%. While exemplary percentage ranges are provided, the underlying principles can be applied for different ranges. Controller **1610** may therefore compare the current battery power level of power supply **1618** to the thresholds in the battery power class scheme to determine which battery power class is correct. Other battery power class schemes may be similarly defined with more or less battery power classes and different thresholds, such as a two-level battery power class scheme with a high power setting (e.g., 50% and above) and a low power setting (e.g., less than 50%) or an unlimited-level battery power class scheme that reports the absolute battery power (expressed e.g., as a percentage or watt-hours) instead of the 'piecewise' battery power class schemes noted above.

As shown in FIG. **33,** controller **1610** may then report the battery power class to network access node **2002** in **3304,** e.g., as a control message. Control module **2610** may receive the battery power class report at network access node **2002.** Control module **2610** may then proceed to select a scheduling setting for terminal device **1502** depending on the reported battery power class in **3306.** As previously indicated, such scheduling settings may be designed to enable terminal device **1502** to selectively deactivate certain hardware components during periods of inactivity. As the battery power class reported by terminal device in **3304** is indicative of a current battery power level, control module **2610** may select scheduling settings in process**3306** that enable higher energy savings for low battery power classes (e.g., the exemplary third or further battery power classes introduced above). As such power-efficient scheduling settings may also result in slight performance degradations, in an exemplary aspect control module **2610** may not select such battery power classes for high battery power classes. Accordingly, control module **2610** may select the scheduling setting for terminal device **1502** based on the reported battery power class.

Control module **2610** may select the scheduling setting from a predefined plurality of scheduling settings that may each provide varying levels of energy savings to terminal devices. In the setting of FIG. **32,** the scheduling settings may enable terminal device **1502** to deactivate one or more of control channel search module **3202,** channel measurement module **3204,** and beamtracking module **3206** for extended periods of time. Control module **2610** may therefore have a predefined plurality of different scheduling settings to select from that offer varying levels of energy savings based on the inactivity time of the modularized modules of physical layer processing module **1608.**

For example, in an exemplary LTE setting, PHY controller **3208** may utilize control channel search module **3202** to search for control messages addressed to terminal device **1502** in the control region of each downlink subframe (as noted above with respect to FIG. **17,** e.g., DCI messages addressed to terminal device **1502** with an RNTI). As specified by the 3GPP, there may be a large set of overlapping groups of REs in the control region that can each contain a control message, e.g., 'PDCCH candidates'. Accordingly, control channel search module **3202** may decode and check these PDCCH candidates in order to identify control messages addressed to terminal device **1502.** This control channel search procedure may require processing resources and, given that the control region of each downlink subframe may be searched, could have a battery power penalty.

Accordingly, if terminal device **1502** reports a low-battery power class in **3304,** control module **2610** may select a scheduling setting that reduces the amount of time that control channel search module **3202** needs to be active. Specifically, control module **2610** may select a scheduling setting in **3306** in which control messages addressed to terminal device **1502** will maintain the same position within the control region (e.g., the same PDCCH candidate) for each subframe. Accordingly, as opposed to checking each control message candidate location, PHY controller **3208** may only instruct control channel search module **3202** to search the dedicated control message position (e.g., the REs assigned to the PDCCH candidate dedicated to terminal device **1502**). PHY controller **3208** may therefore only need to activate control channel search module **3202** for a reduced period of time to decode the dedicated control message position for each downlink subframe and may deactivate control channel search module **3202** during other times, thus conserving battery power. As an alternative to utilizing a single dedicated control message position, control module **2610** may select a scheduling setting in **3306** in which control messages addressed to terminal device **1502** will be located in a reduced subset of the candidate control message positions of the control region. Such may provide control module **2610** with greater flexibility in transmitting control messages (as control module **2610** may need to fit control messages for all terminal devices served by network access node **2002** into the control region) while still reducing the amount of time that control channel search module **3202** needs to be active for decoding. Additionally or alternatively, control module **2610** may select a scheduling setting that uses a temporary fixed control message candidate location scheme, where control messages addressed to terminal device **1502** will remain in a fixed control message location for a predefined number of subframes. Such may likewise reduce the amount of time that control channel search module **3202** needs to be active as control channel search module **3202** may only need to periodically perform a full control message search while maintaining a fixed control message location for all other subframes.

Additionally or alternatively to the fixed/reduced control message candidate location scheme, if terminal device **1502** reports a low-battery power class in **3304,** control module **2610** may select a scheduling setting that reduces the amount of time that channel measurement module **3204** needs to be active. Specifically, control module **2610** may select a scheduling setting in **3306** in which terminal device **1502** is not required to perform and report channel measurements to network access node **2002.** For example, in an LTE setting terminal device **1502** may need to periodically perform radio channel measurements on downlink reference signals (e.g., CRS signals) transmitted by network access node **2002,** which PHY controller **3208** may perform at channel measurement module **3204.** PHY controller **3208** may then either report these radio channel measurements back to network access node **2002** (e.g., for network access node **2002** to evaluate to determine an appropriate downlink modulation and coding scheme (MCS)) or utilize the radio channel measurements to assist in downlink decoding (e.g., for channel equalization). Performing such radio channel measurements necessarily consumes power at channel measurement module **3204,** such that control module **2610** may select a scheduling setting in **3306** that instructs terminal device **1502** to skip radio channel measurements or perform radio channel measurements less frequently. As either case will involve less necessary operation time for channel measurement module **3204,** PHY controller **3208** may conserve battery power by deactivating channel measurement module **3204** unless a radio channel measurement has to be performed according to the scheduling setting.

Additionally or alternatively to the fixed/reduced control message candidate location scheme and the channel measurement deactivation scheme, if terminal device **1502** reports a low-battery power class in **3304,** control module **2610** may select a scheduling setting that reduces the amount of time that beamtracking module **3206** needs to be active. PHY controller **3208** may utilize beamtracking module **3206** to track antenna beamsteering configurations, which may be employed in advanced radio access technologies such as mmWave and other '5G' radio access technologies. As such technologies utilize very high carrier frequencies, path loss may be an issue. Accordingly, many such radio access technologies may employ highly sensitive beamsteering systems in order to counter pathloss with antenna gain. According to an exemplary aspect, PHY controller **3208** may therefore employ beamtracking module **3206** to process received signals to determine beamsteering directions, which may require constant tracking in order to monitor changes or blockages in the transmission beams. The tracking processing performed by beamtracking module **3206** may thus be frequent (e.g., occur less often in time) in addition to computationally intensive and may therefore have high battery power penalties. Accordingly, control module **2610** may select a scheduling setting in **3306** that instructs terminal device **1502** to either deactivate beamtracking or to perform beamtracking less frequently. Such may consequently enable PHY controller **3208** to deactivate beamtracking module **3206** more frequently and thus conserve power.

Each of the fixed/reduced control message candidate location scheme, channel measurement deactivation scheme, and reduced beamtracking scheme may therefore enable physical layer processing module **1608** to conserve power by deactivating one or more of control channel search module **3202,** channel measurement module **3204,** and beamtracking module **3206** at more frequent periods in time. Assuming control channel search module **3202,** channel measurement module **3204,** and beamtracking module **3206** are 'modularized', e.g., physically realized separately with the ability to independently deactivate, PHY controller **3208** may be able to deactivate (or trigger a low-power or sleep state) at each of control channel search module **3202,** channel measurement module **3204,** and beamtracking module **3206** during respective periods of inactivity as provided by the various scheduling settings. The deactivation or triggering of low-power or sleep state, can be made at each of the channel search module **3202,** channel measurement module **3204,** and beamtracking module **3206,** or can be made selectively at one or more of the modules.

The scheduling settings available to control module **2610** may additionally include features not directly related to a modularized hardware design at terminal device **1502.** For example, certain scheduling settings may utilize a fixed MCS and/or data channel position (e.g., PDSCH). Given such scheduling settings, physical layer processing module **1608** may be able to conserve power as a result of such fixed scheduling. Additionally or alternatively, certain scheduling settings may provide fixed and guaranteed uplink grants, where resource allocations for uplink data transmissions are guaranteed for terminal device **1502.** Accordingly, instead of waking up and requesting permission to perform an uplink transmission via a scheduling request, terminal device **1502** may instead be able to wake up and directly proceed to utilize the guaranteed uplink grant resource allocation to perform an uplink transmission.

Additionally or alternatively, network access node **2002** may employ a 'data queuing' scheme as a component of the selected scheduling setting. For example, if terminal device **1502** reports a low-battery power class in **3304,** control module **2610** may select a scheduling setting in **3306** that will 'queue' downlink data intended for terminal device **1502** at network access node **2002.** Accordingly, when downlink data arrives at network access node **2002** from the core network that is addressed to terminal device **1502** (e.g., application data), network access node **2002** may check whether terminal device **1502** is currently in an idle or active state. If terminal device **1502** is in an active state, network access node **2002** may proceed to transmit the data. Conversely, if terminal device **1502** is in an idle state, network access node **2002** may refrain from providing terminal device **1502** with a paging message as per convention; instead, network access node **2002** may queue the data (e.g., temporarily store the data) and wait until terminal device **1502** enters an active state at a later time (e.g., when a voice or data connection is triggered by a user). Once terminal device **1502** enters an active state, network access node **2002** may transmit the waiting data. Such may allow terminal device **1502** to conserve power by having terminal device **1502** enter an active state a single time as opposed to multiple separate times.

The predefined plurality of scheduling settings available to control module **2610** for selection in **3306** may include any one or more of such features described above, including in particular scheduling settings such as the fixed/reduced control message candidate location scheme, channel measurement deactivation scheme, and reduced beamtracking scheme which may enable terminal devices to take advantage of modularized hardware designs to conserve power. As previously indicated, the predefined plurality of scheduling settings may contain individual scheduling settings that are designed for varying power efficiency levels. For example, certain scheduling settings may offer greater power efficiency than other scheduling settings (which may come with some performance cost) by incorporating more of the above-described features. While the predefined plurality of scheduling settings may be readily configurable, the full set of the predefined plurality of scheduling settings may be known at both terminal device **1502** and network access node **2002.**

Control module **2610** may therefore select a scheduling setting out of the predefined plurality of scheduling settings in **3306** based on the battery power class reported by terminal device **1502** in **3304.** Control module **2610** may utilize a predetermined mapping scheme, where each battery power class may be mapped to a specific scheduling setting. Control module **2610** may additionally be configured to consider factors other than battery power class in selecting the scheduling setting in **3306,** such as current cell load and/or current radio conditions.

After selecting a scheduling setting in **3306,** control module **2610** may transmit the selected scheduling setting to terminal device **1502** in **3308,** e.g., as a control message. Terminal device **1502** may then apply the selected scheduling setting in **3310** (where controller **1610** may be responsible for upper layer scheduling while PHY controller **3208** is responsible for physical layer tasks). Accordingly, given the selected scheduling setting PHY controller **3208** may control the control channel search module **3202,** channel measurement module **3204,** and beamtracking module **3206** according to the selected scheduling setting by deactivating control channel search module **3202,** channel measurement module **3204,** and beamtracking module **3206** during respective periods of inactivity. For example, PHY controller **3208** may deactivate control channel search module **3202** according to periods of inactivity related to a fixed/reduced control message candidate location scheme of the selected scheduling setting (if applicable), deactivate channel measurement module **3204** according to periods of inactivity related to a channel measurement deactivation scheme of the selected scheduling setting (if applicable), and deactivate beamtracking module **3206** according to periods of inactivity related to a reduced beamtracking scheme of the selected scheduling setting (if applicable). PHY controller **1608** may additionally realize power savings through fixed MCS and/or resource allocation (uplink or downlink) according to the selected scheduling setting (if applicable). Terminal device **1502** may therefore conserve power in **3310** as a result of the selected scheduling setting provided by network access node **2002.**

FIG. **34** shows method **3400** of operating a communication module arrangement in accordance with an aspect of the disclosure. As shown in FIG. **34,** method **3400** includes performing a first communication processing task with a first communication module and disable the first communication module according to a first communication schedule when the first communication module is not in use for performing the first communication processing task (**3410**). A second communication processing task is performed with a second communication module and the second communication module is temporarily disabled according to a second communication schedule when the second communication module is not in use for performing the second communication processing task (**3420**). A power level is reported to a radio access network and a power-saving communication schedule is received in response to the reported power level. The power-saving communication schedule may include scheduling requirements for the first communication processing task and the second communication processing task (**3430**), and disabling the first communication module according to the scheduling requirements for the first communication processing task and disabling the second communication module according to the scheduling requirements for the second processing task (**3440**).

Cooperation with a network access node, such as network access node **2002,** may therefore be relied on to select scheduling settings based on a reported battery power. The predefined plurality of scheduling settings may therefore include various different scheduling settings that enable terminal devices, in particular terminal devices with modularized hardware designs such as terminal device **1502,** to selectively deactivate hardware components in order to conserve power. While the above-described examples explicitly refer to specific hardware components (control channel search module **3202,** channel measurement module **3204,** and beamtracking module **3206**) that are included as PHY-layer components, other types of modules including both PHY and non-PHY layer modules may be employed in an analogous manner, e.g., by deactivating during periods of inactivity according to a specialized scheduling setting in order to conserve power. For example, other types of modules to which these aspects can be applied include processors, which can be configured with sleep/wake schedules and/or frequency scaling (which other modules can also use).

## 2.4 Power-Efficiency #4

In accordance with a further aspect of the disclosure, a terminal device may adapt downlink and uplink processing based on current operating conditions of the terminal device including battery power level and radio conditions. For example, a terminal device may employ lower-complexity demodulation and receiver algorithms in the downlink direction if strong radio conditions and/or low battery power levels are observed. Additionally, the terminal device may modify uplink processing by disabling closed-loop power control, adjusting transmission power, and/or reducing RF oversampling rates if strong radio conditions and/or low battery power levels are observed. Additionally, a terminal device may employ dynamic voltage and frequency scaling to further reduce power consumption if low battery power and/or strong radio conditions are observed. These aspects may be used with common channel aspects, e.g., a common channel employing variable complexity demodulation and receiver algorithms depending on radio conditions or battery power levels.

FIG. **35** shows an exemplary internal architecture of terminal device **1502** in accordance with some aspects of an aspect of this disclosure. As shown in FIG. **35,** terminal device **1502** may include antenna **1602,** first receiver **3502,** second receiver **3504,** third receiver **3506,** radio condition module **3508,** control module **3510,** power consumption module **3512,** power supply **1618,** other module **3514,** application processor **3516,** network module **3518,** and other module **3520.** As denoted in FIG. **35,** first receiver **3502,** second receiver **3504,** third receiver **3506,** radio condition module **3508,** control module **3510,** and power consumption module **3512** may be included as part of RF transceiver **1604** and/or baseband modem **1606** of terminal device **1502** while other module **3514,** application processor **3516,** network module **3518,** and other module **3520** may be included as part of data source **1612** and/or data sink **1616** of terminal device **1502.**

Receivers **3502, 3504,** and **3506** may perform downlink processing on radio signals provided by antenna system **1602** as previously discussed with respect to terminal device **1502.** In some aspects, each of receivers **3502, 3504,** and **3506** may be physically distinct receiver structures (e.g., structurally separate receiver instances each implemented as different hardware and/or software components) or may be different configurations of one or more single receiver structures. For example, in some aspects each of receivers **3502, 3504,** and **3506** may be implemented as separate hardware and/or software components (e.g., physically distinct) or may be different configurations of the same hardware and/or software components (e.g., different configurations of a single receiver structure). Regardless, the reception processing performed by each of receivers **3502, 3504,** and **3506** may be different. For example, each of receivers **3502, 3504,** and **3506** may utilize different receiver algorithms, hardware components, software control, etc. Accordingly, receivers **3502, 3504,** and **3506** may each have different reception performance and different power consumption. Generally speaking, receivers with higher performance yield higher power consumption. For example, receiver **3502** may utilize an equalizer while receiver **3504** may utilize a rake receiver; consequently, receiver **3502** may have better performance and higher power consumption than receiver **3504.** Additionally or alternatively, receiver **3504** may utilize a sphere decoder which may improve the demodulation performance of receiver **3504** while also increasing the power consumption. Each of receivers **3502, 3504,** and **3506** may have similar such differences that lead to varying levels of performance and power consumption, such as different decoders, different equalizers, different filter lengths (e.g., Finite Impulse Response (FIR) filter taps), different channel estimation techniques, different interference cancellation techniques, different noise cancellation techniques, different processing bit width, different clock frequencies, different component voltages, different packet combination techniques, different number of algorithmic iterations, different usage of iterative techniques in or between components, etc. Although antenna system **1602** is depicted separately in FIG. **35,** in some aspects receivers **3502, 3504,** and **3506** may additionally utilize different antenna configurations, such as different numbers of antenna, different beamforming settings, different beamsteering settings, different antenna sensitivities, different null-steering settings (e.g., positioning of nulls based on interferers), etc. The specific configuration of such factors for each of receivers **3502, 3504,** and **3506,** along with the associated performance and power consumption levels, may be predefined. Each of receivers **3502, 3504,** and **3506** may be implemented as various different antenna (antenna system **1602**), RF (RF transceiver **1604**), physical layer (physical layer processing module **1608**), and/or protocol stack (controller **1610)** components and thus may be related to reception processing at any of the RF, PHY, and/or protocol stack levels.

Control module **3510** may be responsible for selecting which of receivers **3502, 3504,** and **3506** (via the control module output lines denoted in FIG. **35,** which may be intercore messages or control signals), to utilize for reception processing on signals provided by antenna system **1602.** Accordingly, the selected receiver may perform its respective reception processing to produce the resulting downlink data. Control module **3510** may be a controller configured to execute program code defining control logic for receiver selection and may be included as a software component of controller **1610,** a software component of a physical layer control module of physical layer processing module **1608,** or as a separate software component of terminal device **1502.**

Control module **3510** may be configured to select a receiver based on current radio conditions and current power levels. For example, in strong radio conditions control module **3510** may be configured to select a low-power receiver (which may also have lower performance) as the strong radio consumptions may not demand high performance. Conversely, control module **3510** may be configured to select a high-performance receiver in poor radio conditions in order to yield sufficient reception quality. Additionally, control module **3510** may be configured to select a low-power receiver if power supply **1618** has a low battery power level.

As shown in FIG. **35,** control module **3510** may receive input from radio condition module **3508** and power consumption module **3512,** which may be configured to monitor current radio conditions and power consumption, respectively, and thus may provide control module **3510** with current radio and power statuses. Radio condition module **3508** may thus monitor outputs from receivers **3502, 3504,** and **3506** (via the radio condition input lines denoted in FIG. **34**) which may report parameters such as radio measurements (e.g., signal power, signal quality, signal-to-noise ratio (SNR), signal-to-interference-plus-noise ratio (SINR), etc.), channel parameters (e.g., Doppler spread, delay spread, etc.), error metrics (e.g., cyclic redundancy check (CRC) rate, block/bit error rates, average soft bit magnitudes, etc.) , retransmission rates, etc., provided by receivers **3502, 3504,** and **3506** that are indicative of radio conditions. Radio condition module **3508** may evaluate such parameters and provide a radio condition indication to control module **3510** that specifies the current radio conditions of terminal device **1502,** thus enabling control module **3510** to select a receiver based on the current radio conditions.

Similarly, power consumption module **3512** may monitor outputs from receivers **3502, 3504,** and **3506** (via the power consumption input lines denoted in FIG. **34**), and report power consumption data to control module **3510** which may indicate the current power consumption of receivers **3502, 3504,** and **3506.** Power supply **1618** may also provide at least one of power consumption data and current battery power level data to power consumption module **3512,** which may indicate overall power consumption and remaining battery power levels of terminal device **1502.** Power consumption module **3512** may then evaluate such data and provide a power status indication to control module **3510** that specifies, for example, both the current power consumption and current battery power level of terminal device **1502,** thus enabling control module **3510** to select a receiver based on the current power status of terminal device **1502.** In some aspects, radio condition module **3508** and power consumption module **3512** may be implemented as software components such as processors configured to receive input from receivers **3502, 3504,** and **3506** and evaluate the inputs to provide indication data to control module **3510.** Radio condition module **3508** and power consumption module **3512** may be implemented together (e.g., at a common processor which may e.g., be the same processor as control module **3510**) or separately.

As shown in FIG. **35,** control module **3510** may also receive input from data source **1612**/data sink **1616** including e.g., other module **3514,** application processor **3516,** network module **3518,** and other module **3520.** Such input data may include data related to applications currently being executed on application processor **3516,** user power control commands provided via application processor **3516,** thermal or heat measurements by a heat detection module (provided by e.g., other module **3514** or other module **3520**), positioning, location, and/or velocity information (provided by e.g., other module **3514** or other module **3520**), network data provided by network module **3518,** etc. Control module **3510** may also be configured to consider such input data in the receiver selection process. For example, high thermal or heat measurements may prompt selection of a lower-power receiver while high mobility (indicated by velocity and/or positional changes) may prompt selection of a higher performance receiver. In some aspects, control module **3510** may periodically analyze conditions as part of the selection process. The evaluation period can vary, and can also be different for different parts of the receive chain. For example, the inner receiver can evaluate/switch more frequently than an independent outer receiver component. In an exemplary LTE setting, the evaluation period can be, for example, 1 ms (e.g., one downlink TTI) or . 5 ms (e.g., one slot). A frame that has a length of 1 ms could also be the evaluation period. In some aspects, the gaps in TDD for LTE, which can happen once or twice every 10 ms, could also serve as the evaluation period. In some aspects, there may also be much longer intervals in the order of seconds or minutes. For example, in an idle radio state (e.g., when paging), the receiver is only briefly active for the paging cycle, for example, every 1.28 seconds. Accordingly, control module **3510** may only be able to perform an evaluation according to this grid, e.g., when the receiver is on. In some aspects, the evaluation may be also based on an moving average so that the decision is not only based on a single evaluation interval but on a number of past evaluation intervals.

Control module **3510** may therefore be configured to select one of receivers **3502, 3504,** and **3506** to utilize for reception processing based on radio conditions (reported by radio condition module **3508**), power information (provided by power consumption module **3512),** and other various factors (provided by other module **3514,** application processor **3516,** network module **3518,** and other module **3520**). As previously indicated, receivers **3502, 3504,** and **3506** may preconfigured (either with different hardware or software configurations) according to different decoders, different equalizers, different filter lengths, different channel estimation techniques, different interference cancellation techniques, different noise cancellation techniques, different processing bit width, different clock frequencies, different component voltages, different packet combination techniques, different number of algorithmic iterations, different usage of iterative techniques in or between components, different numbers of antenna, different beamforming settings, different beamsteering settings, different antenna sensitivities, different null-steering settings, etc., and may accordingly each provide different performance and power consumption levels according to their respective configurations. It is appreciated that any combination of such factors may be available to a designer to arrive at the preconfiguration for each of receivers **3502, 3504,** and **3506.** Additionally, while FIG. **35** depicts three receivers, this is demonstrative and the number of preconfigured receivers can be scalable to any quantity.

Control module **3510** may then select one of receivers **3502, 3504,** and **3506** based on, for example, the radio condition status, power consumption status, and the respective power consumption and performance properties of each of receivers **3502, 3504,** and **3506.** The selection logic may be predefined, such as with a lookup table with a first dimension according to a power consumption level (e.g., a quantitative power level and/or current power consumption level) provided by power consumption module **3512** and a second dimension according to a radio condition level (e.g., a quantitative radio condition level) provided by radio condition module **3508** where each entry of the lookup table gives a receiver selection of receiver **3502, 3504,** or **3506.** Control module **3510** may then input both the power consumption level and the radio condition level into the lookup table and select the receiver corresponding to the resulting entry as the selected receiver. Such a predefined lookup table scheme may be expanded to any number of dimensions, with any one or more of e.g., current power consumption, current battery power level, radio measurements (e.g., signal power, signal quality, signal-to-noise ratio (SNR), signal-to-interference-plus-noise ratio (SINR), etc.), channel parameters (e.g., Doppler spread, delay spread, etc.), error metrics (e.g., cyclic redundancy check (CRC) rate, block/bit error rates, average soft bit magnitude, etc.), retransmission rates, etc., used as dimensions of the lookup table where each entry identifies a receiver to utilize as the selected receiver. Depending on the specifics of the predefined lookup table, control module **3510** may input the current data into the lookup table to identify one of receivers **3502, 3504,** and **3506** to use as the selected receiver. Alternative to a completely predefined lookup table, control module **3510** may update the lookup table during runtime, e.g., based on continuous power logging. Regardless of such specifics, control module **3510** may input certain radio condition and/or power parameters into a lookup table in order to identify which of receivers **3502, 3504,** and **3506** to use as the selected receiver. Control module **3510** may store the lookup table locally or at another location accessible by control module **3510.**

Although the receiver selection logic can be flexible and open to design considerations, without loss of generality, control module **3510** may largely aim to utilize high-performance receivers in poor radio condition scenarios and to utilize low-power receivers in low-power scenarios. For example, if radio condition module **3508** indicates that radio conditions are poor, control module **3510** may be configured to select a high-performance receiver out of receivers **3502, 3504,** and **3506** (where e.g., the lookup table is configured to output high-performance receiver selections for poor radio condition inputs) via the control module output lines shown in **FIG. 35,** Similarly, if power consumption module **3512** indicates that battery power is low or current power consumption is high, control module **3510** may be configured to select a low-power receiver out of receivers **3502, 3504,** and **3506** (where e.g., the lookup table is configured to output low-power receiver selections for low battery power and/or high power consumption inputs) via the control module output lines.

In some aspects, control module **3510** may perform receiver selection in a worst-case scenario, such as where radio conditions are poor and/or the receiver has low power. The worst-case scenario could also be listed in the lookup table, and have specific receiver selections that are tailored for worst case scenarios. In some aspects, there could also be a further process to consider additional parameters in receiver selection, such as traffic type (where, for example, during a voice call, the receiver selection strategy may be to keep the call alive, while in a data-only scenario a reduced data rate may be acceptable) or location/'social' knowledge (for example, proximity to a charging possibility). These parameters may be defined as inputs to the lookup table, and control module **3510** may accordingly obtain receiver selection outputs from the lookup table using these parameters as inputs during worst-case scenarios.

In some aspects, the prioritization for battery life or performance in receiver selection by control module **3510** may further depend on the associated application. For example, when performing voice communication, performance may be more important. Control module **3510** may accordingly place a higher priority on performance when performing voice communication. When performing downloads (e.g., non-realtime), battery life may be more important. Control module **3510** may consequently place a higher priority on battery life when performing downloads.

Control module **3510** may additionally or alternatively employ other strategies in receiver selection. For example, in some aspects control module **3510** may minimize total power consumption by, for example, selecting a high-performance receiver in order to download pending downlink data as quickly as possible. Alternatively, if the performance enhancement provided by a high-performance receiver is not warranted given the current radio conditions, control module **3510** may utilize a lower performance receiver with lower power consumption. Furthermore, in various aspects the configuration of terminal device **1502** may be more sensitive to either dynamic power or leakage power, where terminal devices sensitive to dynamic power may be more power efficient when performing light processing spread over long periods of time and terminal devices sensitive to leakage power may be more power efficient when performing heavy processing over short and brief periods of time. Control module **3510** may therefore be configured to select high-performance receivers to quickly download data in the leakage-sensitive case or low-performance receivers to gradually download data in the dynamic-sensitive case.

Additionally or alternatively to receiver selection, in some aspects control module **3510** (or another dedicated control module) may employ transmitter selection similarly based on radio and/or power conditions. FIG. **36** shows an internal configuration of terminal device **1502** with transmitters **3602, 3604,** and **3606** in accordance with some aspects. Although shown separately in FIGs. **35** and **36,** in some aspects terminal device **1502** may include both receivers **3502, 3504,** and **3506** and transmitters **3602, 3604,** and **3606** and may utilize both the receiver and transmitter selection schemes. Transmitters **3602, 3604,** and **3606** may perform uplink processing on uplink data provided by controller **1610** (not shown in FIG. **36**) as discussed with respect to terminal device **1502.** Similarly, as discussed with respect to receivers **3502, 3504,** and **3506,** in various aspects each of transmitters **3602, 3604,** and **3606** may be physically distinct transmitter structures (e.g., structurally separate transmitter instances) or may be different configurations of one or more single transmitter structures. For example, in some aspects each of transmitters **3602, 3604,** and **3606** may be implemented as separate hardware and/or software components (e.g., physically distinct) or may be different configurations of the same hardware and/or software components (e.g., different configurations of a single receiver structure). Regardless, the transmission processing performed by each of transmitters **3602, 3604,** and **3606** may be different. For example, each of transmitters **3602, 3604,** and **3606** may utilize different transmitter algorithms, hardware components, software control, etc. Although antenna system **1602** is depicted separately in FIG. **36,** transmitters **3602, 3604,** and **3606** may additionally utilize different antenna configurations, such as different numbers of antenna, different beamforming settings, different beamsteering settings, different antenna sensitivities, etc.

Accordingly, each of transmitters **3602, 3604,** and **3606** may have different performance and power consumption levels, which may result from different RF oversampling rates, different transmission powers, different power control (e.g., closed-loop power control vs. open-loop power control), different numbers of antenna, different beamforming settings, different beamsteering settings, different antenna sensitivities, etc. The specific configuration of such factors for transmitters **3602, 3604,** and **3606,** along with the associated performance and power consumption levels, may be predefined. In some aspects, each of transmitters **3602, 3604,** and **3606** may be implemented as various different antenna (antenna system **1602**), RF (RF transceiver **1604**), physical layer (physical layer processing module **1608**), and/or protocol stack (controller **1610**) components and thus may be related to reception processing at any of the RF, PHY, and/or protocol stack levels.

As in the case of receiver selection, control module **3510** may be configured to select which of transmitters **3602, 3604,** and **3606** to utilize for transmission processing on signals provided to antenna **1602.** Accordingly, control module **3510** may be configured to evaluate radio condition and power status data provided by radio condition module **3508** and power consumption module **3512** in order to select one of transmitters **3602, 3604,** and **3606** based on the performance and power consumption characteristics of transmitters **3602, 3604,** and **3606.** As indicated above, transmitters **3602, 3604,** and **3606** may have different RF oversampling rates, different transmission powers, different power control (e.g., closed-loop power control vs. open-loop power control), different numbers of antenna, different beamforming settings, different beamsteering settings, different antenna sensitivities, etc. Accordingly, both high RF oversampling rate and high transmission power may yield higher performance but have higher power consumption. Regarding power control, in some aspects certain transmitters may utilize a transmit feedback receiver, which may be an analog component included as part of the transmitter circuitry. Transmitters may utilize the transmit feedback receiver to monitor actual transmit power, thus forming a 'closed-loop' for power control in order to improve the accuracy of transmission power. While the use of such closed-loop power control may yield higher performance, operation of the transmit feedback receiver may increase power consumption. Accordingly, closed-loop power control may yield higher performance and higher power consumption than open-loop power control.

Control module **3510** may therefore similarly be configured to select one of transmitters **3602, 3604,** and **3606** based on control logic, which may be e.g., a predefined or adaptive lookup table or similar type of selection logic in which control module **3510** may input parameters such as current power consumption, current battery power level, radio measurements (e.g., signal power, signal quality, signal-to-noise ratio (SNR), signal-to-interference-plus-noise ratio (SINR), etc.), channel parameters (e.g., Doppler spread, delay spread, etc.), error metrics (e.g., cyclic redundancy check (CRC) rate, block/bit error rates, average soft bit magnitude, etc.), retransmission rates, etc., in order to obtain a selection of one of transmitters **3602, 3604,** and **3606.** Control module **3510** may also generally be configured to select high performance transmitters during poor radio conditions, low performance and low power transmitters during strong radio conditions, and low power transmitters during low battery conditions and may also be configured to consider dynamic and leakage power sensitivity in transmitter selection.

For example, in an exemplary scenario, transmitter **3602** may be more precise than transmitter **3604** (e.g., according to Error Vector Magnitude (EVM)) but have higher power consumption than transmitter **3604.** Due to its lesser performance, transmitter **3604** will require an increased transmit power to achieve the same performance. However, at low or minimum transmit powers the contribution of such a transmit power increase to total power consumption may be less than the power saved through use of transmitter **3604** over transmitter **3602.** Consequently, it may be prudent to utilize transmitter **3604,** which has the lower base power consumption.

In some aspects, control module **3510** may trigger transmitter selection based on a triggering criteria. Non-limiting examples of triggering criteria can include detection that the transmit power is above/below a certain threshold, detecting that the bandwidth actually being used is above or below a certain threshold, detecting that the measured error rate is above or below a certain threshold, detecting that battery power has fallen below a threshold, detecting that power supply **1618** is charging, or detecting that the retransmission rate (e.g., uplink HARQ rate from eNB to UE in an exemplary LTE setting) is above/below a threshold. Control module **3510** may monitor such triggering criteria and trigger transmitter selection when they are met.

As both transmitter and receiver selections may have an impact on power consumption and be impacted by radio conditions, in some aspects control module **3510** may be configured to consider the performance and power consumption requirements of both receivers and transmitters during transmitter and receiver selection. Control module **3510** can be implemented as a single unified control module responsible for control of both receivers and transmitters or as two separate control modules each respectively responsible for control of one of receiver or transmitter selection.

The receiver and transmitter selection schemes described herein can utilize fixed receiver and transmitter configurations, where the properties of receivers **3502, 3504,** and **3506** and transmitters **3602, 3604,** and **3606** are predefined and static, e.g., as either separate structural components or as different fixed configurations of the same structural components. Alternatively, in some aspects one or more of receivers **3502, 3504,** and **3506** and one or more of transmitters **3602, 3604,** and **3606** may be 'configurable' and accordingly may have certain enhancement features that may be turned on/off, switched, or adjusted, such as any of the aforementioned features related to decoders, equalizers, filter lengths, channel estimation techniques, interference cancellation techniques, noise cancellation techniques, processing bit width, clock frequencies, component voltages, packet combination techniques, number of algorithmic iterations, usage of iterative techniques in or between components, RF oversampling rates, transmission powers, power control, number of antennas, beamforming setting, beamsteering setting, antenna sensitivity, null-steering settings, etc. As these enhancement features may impact performance and power consumption, control module **3510** may oversee the activation, deactivation, and exchange of these enhancement features based on radio condition and power status data.

FIGs. **37** and **38** show exemplary configurations of terminal device **1502** (which may both be implemented simultaneously or separately at terminal device **1502**) in accordance with some aspects. As shown in FIG. **37** and **38,** one or more of receivers **3502, 3504,** and/or **3506** and transmitters **3602, 3604,** and **3606** may have enhancement features. Specifically, receiver **3504** may have receiver enhancement feature 2.1, receiver **3506** may have receiver enhancement features 3.1 and 3.2, transmitter **3604** may have transmitter enhancement feature 2.1, and transmitter **3606** may have transmitter enhancement features 3.1 and 3.2. The enhancement features may be software and/or hardware enhancement features; for example, the enhancement features may be a specific software algorithm, specific dedicated hardware, or a specific integrated hardware and software component. For example, the enhancement features may include particular decoders (e.g., sphere decoder), channel processor (e.g., equalizer), interference canceller (e.g., an advanced interference cancellation scheme), or any other feature related to decoders, equalizers, filter lengths, channel estimation techniques, interference cancellation techniques, noise cancellation techniques, processing bit width, clock frequencies, component voltages, packet combination techniques, different number of algorithmic iterations, different usage of iterative techniques in or between components, RF oversampling rates, transmission powers, power control, number of antennas, beamforming setting, beamsteering setting, antenna sensitivity, null-steering setting, etc. Each of the enhancement features may thus be ’fixed’ features that can be selectively switched on or off by control module **3510.**

The activation of such enhancement features may generally improve performance at the cost of increased power consumption. Instead of having to select between fixed sets of receivers and transmitters, control module **3510** may therefore also have the option to selectively activate any of the enhancement features in order to further control the balance between performance and power consumption. Control module **3510** may thus be configured with control logic (e.g., a lookup table or similar selection logic) to select a specific receiver along with any specific enhancement features from receivers **3502, 3504,** and/or **3506** and likewise be configured with control logic to select a specific transmitter along with any specific enhancement features from transmitters **3602, 3604,** and **3606.** Such may accordingly give control module **3510** greater flexibility in controlling the performance and power consumption balance dependent on the current radio condition and power status reported by radio condition module **3508** and power consumption module **3512.**

Although FIGs. **37** and **38** depict multiple ’fixed’ receivers and transmitters, in some aspects control module **3510** may be able to perform receiver and transmitter selection with only one receiver and/or transmitter by deciding which enhancement features to activate and deactivate. For example, if terminal device **1502** includes only receiver **3506** and transmitter **3606,** control module **3510** may monitor the radio condition and power status data provided by radio condition module **3508** and power consumption module **3512** in order to determine whether to increase performance (e.g., in the case of poor radio conditions) or to reduce power consumption (e.g., in the case of strong radio conditions or low battery power). Control module **3510** may then activate enhancement features to increase performance or deactivate enhancement features to decrease power consumption.

As previously indicated, in some aspects each of receivers **3502, 3504,** and **3506** and transmitters **3602, 3604,** and **3606** may be fixed receivers and transmitters (optionally with fixed enhancement features) and accordingly may each be implemented as antenna, RF, PHY, and protocol stack level components. Each of the individual components (hardware and/or software) may thus be a ’module’, which may be a hardware or software component configured to perform a specific task, such as a module related to any one or more of decoders, equalizers, filter lengths, channel estimation techniques, interference cancellation techniques, noise cancellation technique, processing bit width, clock frequencies, component voltages, number of algorithmic iterations, usage of iterative techniques in or between components, packet combination techniques, RF oversampling rates, transmission powers, power control, number of antennas, beamforming setting, beamsteering setting, antenna sensitivity, null-steering settings, etc. (where each of the enhancement features of FIGs. **37** and **38** may also be considered a module or combination of modules). Exemplary modules thus include decoders, equalizers, rake receivers, channel estimators, filters, interference cancelers, noise cancelers, etc. FIG. **39** shows a simplified internal diagram of receiver **3502** and transmitter **3602** according to some aspects. As shown in FIG. **39,** receiver **3502** may include modules **3902, 3904, 3906,** and **3908,** which may each configured to perform a different reception processing task in order to output downlink data while transmitter **3602** may include modules **3910, 3912, 3914,** and **3916** each configured to perform a different transmission processing task in order to output uplink data. Modules **3902, 3904, 3906, 3908, 3910, 3912, 3914,** and **3916** may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware) stored in a non-transitory computer-readable storage medium, or as a mixed hardware-defined and software-defined module.

In addition to switching between fixed receivers and transmitters (in addition to enhancement features) as described above, in some aspects control module **3510** may additionally be configured to adjust local parameters within receiver and transmitter modules to help optimize the performance and power consumption balance of terminal device **1502.** Exemplary adjustments include e.g., adapting the number of iterations for iterative algorithms (e.g., turbo channel decoder iterations), adapting the number of rake fingers used for a certain cell or channel, adapting the size of an equalizer matrix (where smaller matrices simplify inversion), adapting processing efficiency (e.g., switching the number of finite impulse response (FIR) filter taps), adapting processing bit width, etc. Control module **3510** may therefore be able to control receivers **3502, 3504,** and **3506** and transmitters **3602, 3604,** and **3606** at the 'module' level in order to optimize performance and power consumption.

For example, in some aspects control module **3510** may monitor the current radio condition and power status data provided by radio condition module **3508** and power consumption module **3512** to determine whether there are currently strong or poor radio conditions, high or low remaining battery power, and/or high or low current power consumption. Depending on the current radio condition and power status data, control module **3510** may decide to increase/decrease performance or to increase/decrease power consumption. In addition to selecting a receiver (or, for example, in cases where terminal device **1502** has only one receiver), control module **3510** may adjust the selected receiver at a module level to optimize performance vs. power consumption (and likewise for transmitters). For example, control module **3510** may increase iterations for iterative algorithms to increase performance and vice versa to decrease power consumption, increase the number of rake fingers to increase performance and vice versa to decrease power consumption, increase equalizer matrix size to increase performance and vice versa to decrease power consumption, increase FIR filter length to increase performance and vice versa to decrease power consumption, increase processing bit-width to increase performance and vice versa to decrease power consumption etc. Such may be defined by the control logic at control module **3510** that renders decisions based on radio condition and power status data.

In some aspects, control module **3510** may also rely on local control at each of the receiver and transmitter modules. FIG. **40** shows exemplary internal architectures of receiver modules **3902** and **3904** of receiver **3502** in accordance with some aspects. As shown in FIG. **40,** in some aspects modules **3902** and **3904** may include a local control module, a quality measurement module, and a receiver algorithm module. The receiver algorithm module may apply the actual dedicated receiver processing of the respective module. The quality measurement module may evaluate the local performance of the receiver algorithm module. The local control module may oversee operation of the respective module in accordance with the performance and power consumption balance optimization. Modules **3902** and **3904** may interface with control module **3510** at the respective local control modules. Accordingly, control module **3510** may provide module-level control, e.g., to increase performance or to decrease power consumption, to the local control modules, which may then be responsible for implementing the control. The local control modules may also receive input from application processor **3516** and other triggers or information sinks.

Accordingly, the quality measurement modules may evaluate the performance of the receiver algorithm modules, such as with a quantitative metric related to the receiver algorithm module. For example, if module **3902** is a decoder, the receiver algorithm module may perform decoding while the quality measurement module may evaluate the decoder performance, such as by evaluating the soft bit quality (e.g., magnitude of a soft probability) for input data to each channel decoder iteration. The quality measurement module may then provide the local control module with a performance level of the receiver algorithm module, which the local control module may utilize to evaluate whether performance is sufficient. If control module **3510** has indicated performance should be high, e.g., in poor radio conditions, and the local control module determines that the receiver algorithm module has insufficient performance, the local control module and control module **3510** may interface to determine whether the receiver algorithm module should be adjusted to have higher performance, which may come at the cost of higher power consumption.

FIG. **41** shows an exemplary internal configuration of module **3902** in accordance with some aspects. In the exemplary setting of FIG. **41,** module **3902** may be configured as e.g., a demodulator. As shown in FIG. **41,** module **3902** may include demodulator module **4102,** cyclic redundancy check (CRC) module **4104,** local control module **4106,** and channel quality estimation module **4108.** Demodulator module **4102** may function as the receiver algorithm module while CRC module **4104** may function as the quality measurement module. Local control module **4106** may therefore interface with CRC module **4104** to evaluate the performance of demodulator module **4102,** where high CRC error may indicate poor performance and low CRC error may indicate high performance. Local control module **4106** may interface with control module **3510** to handle performance and power consumption commands from control module **3510.** Local control module **4106** may then control complexity tuning at demodulator module **4102,** where increases in complexity may yield better performance at the expense of higher power consumption. For example, local control module **4106** may increase or decrease the demodulation algorithm complexity of demodulator module **4102,** such as e.g., by switching from a linear interpolator to advanced filters for channel estimation (complexity and performance increase, and vice versa for complexity and performance decrease), switching the equalization algorithm from simple minimum mean squared error (MMSE) decoder to complex maximal likelihood (ML) decoder (complexity and performance increase, and vice versa for complexity and performance decrease). Additionally or alternatively, local control module **4106** may increase the processing efficiency of a given demodulation algorithm, such as by increasing number of FIR filter taps for a channel estimator (complexity and performance increase, and vice versa for complexity and performance decrease) or by increasing the number of iterations of a channel decoder (complexity and performance increase, and vice versa for complexity and performance decrease).

Additionally, channel quality estimation module **4108** may estimate channel quality based on input signals to obtain a channel quality estimate, which channel quality estimation module **4108** may provide to radio condition module **3508** and local control module **4106.** Radio condition module **3508** may then utilize inputs such as the channel quality estimate to evaluate radio conditions to indicate the current radio condition status to control module **3510.** Local control module **4106** may utilize the channel quality estimate from channel quality estimation module **4108** and the quality measurement from CRC module **4104** to perform local control over the demodulation complexity of demodulator module **4102.** Control module **3510** may perform global control (e.g., joint control of multiple local control modules) based on the radio conditions provided by radio condition module **3508** to scale demodulation complexity over multiple modules.

In some aspects, the local control modules of modules **3902** and **3904** may also interface with each other as shown in FIG. **40.** Accordingly, the local control modules may communicate without control module **3510** as an intermediary and may consequently be able to cooperate in order to coordinate performance and power consumption. For example, module **3902** could request a change at module **3904** to ask for a performance enhancement or power consumption reduction at module **3904** if the modules are robust against the requests (e.g., can fulfill requests in most/all cases) and no deadlock or catastrophic resonant feedback loops can occur, for example. In an exemplary scenario, module **3902** may be a Turbo channel decoder and module **3904** may be a downlink power control unit. Turbo channel decoder/module **3902** may request downlink power control unit/module **3904** to request the radio access network for a higher downlink transmission power, which would enable Turbo channel decoder/module **3902** to improve demodulation performance and potentially require less decoder iterations, thus conserving power. Such an increase in downlink power may be possible if the radio access network/current serving cell is not loaded and should have no negative impact on the power consumption in other modules. Numerous different scenarios in which modules (both in the receiver case shown in FIG. **40** and in the analog transceiver case) may communicate with one another and/or with control module **3510** in order to adjust the performance and power consumption balance.

Control module **3510** may therefore have a wide degree of control over the receivers and transmitters of terminal device **1502,** including the ability to select specific receivers and transmitters, activate/deactivate specific receiver and transmitter enhancement features, and control individual receivers and transmitters at a module level. In particular when controlling receivers and transmitters at a module level, the impact of even minor changes at multiple modules may have impacts on power consumption. Accordingly, control module **3510** may implement a monitoring scheme to monitor the status of multiple modules in order to help prevent or reduce sudden jumps in power consumption.

FIG. **42** shows such a configuration (in which other components of terminal device **1502** are graphically omitted for simplicity) in accordance with some aspects, in which control module **3510** may interface with multiple modules **4202, 4204, 4206, 4208,** and **4210,** which may either be transmitter or receiver modules. Control module **3510** may monitor operation at each of modules **4202, 4204, 4206, 4208,** and **4210** to detect potential jumps in power consumption that may arise from even small operational changes at one or more modules. For example, a slight increase in required Million Instructions per Second (MIPS) for a task at e.g., module **4202** may lead to a jump in voltage and/or clock of a software component, such as a processor core or digital signal processor (DSP), which may be implemented in module **4202,** and which may not be linearly connected to the small MIPS increase that triggered it. Such voltage and/or clock changes may additionally apply to hardware blocks, such as module **4204** implemented as a hardware component. Additionally, if the radioed transmit power is increased above certain levels, there may be a switch to a different power amplifier mode, such as in, e.g., module **4208** implemented as a power amplifier, which could result in a jump in the power needed for the certain radioed transmit power.

Accordingly, in some aspects control module **3510** may interface with each of modules **4202, 4204, 4206, 4208,** and **4210** to preemptively detect such jumps in power consumption prior to their actual occurrence. Upon detection, control module **3510** may adapt behavior of the corresponding modules to help prevent the power consumption jump from occurring. Such may include accepting minimal degradations in performance, which may avoid the power consumption jump and may in certain cases not be noticeable to a user. In some aspects, control module **3510** may perform such monitoring based on parameter measurements and threshold comparisons. For example, each module may have a specific operating parameter that control module **3510** may monitor in order to detect potential power consumption jumps. Accordingly, each module (shown for modules **4208** and **4210** in FIG. **42)** may therefore include a measurement module for measuring the parameter of interest. The modules may then provide the measured parameter to control module **3510,** which may determine if each respective measured parameter is above a respective threshold, where the thresholds may indicate potential triggering of a large jump in power consumption. If a module reports a measured parameter above the threshold, control module **3510** may instruct the module to modify behavior to bring the parameter back below the threshold. Control module **3510** may therefore help prevent power consumption jumps and thus maintain an optimal performance and power consumption balance.

Control module **3510** may thus employ any one or more of the techniques described above to maintain a desired balance between performance and power consumption, which control module **3510** may monitor based on performance and power status data. Control module **3510** may additionally consider the receiver and/or transmitter states of terminal device **1502,** as different receiver and transmitter states may yield different power states and power consumptions.

For example, radio access technologies such as LTE, UMTS, and other 3GPP and non-3GPP radio access technologies may assign certain 'states' to terminal device operation. Such states may include connected states (e.g., RRC_CONNECTED or CELL_DCH), idle and paging states and other various states (e.g., Forward Access Channel (FACH) and enhanced FACH (eFACH), etc.). Terminal device **1502** may additionally have other 'internal states, such as related to algorithms such as whether Carrier Aggregation is enabled, bandwidth states such as an FFT size for LTE, whether HSDPA is enabled versus normal UMTS Dedicated Channel (DCH) operation, whether GPRS or EDGE is enabled, etc., in addition to other chip-level states such as low-power mode, high/voltage clock settings, memory switchoffs, etc. Such states may be present for multiple radio access technologies, e.g., during a handover. Control module **3510** may receive indications of such states from e.g., module **3514,** application processor **3516,** network module **3518,** other module **3520,** etc., and may utilize such knowledge in receiver and transmitter selection to optimize the performance and power consumption balance.

In some aspects, control module **3510** may utilize other techniques that may generally apply to the various receivers and transmitters of terminal device **1502.** For example, during idle transmit and/or receive periods, control module **3510** may switch off the transmitters and receivers e.g., with clock and/or power gating. Alternatively, the components of RF transceiver **1604** and baseband modem **1606** may be configured to employ Dynamic Voltage and Frequency Scaling (DVFS). Consequently, depending on the current performance and processing complexity of the various receivers and transmitters of terminal device **1502,** control module **3510** may scale back component voltage and/or processing clock frequency to conserve power. For example, based on the processing efficiency yielded by the performance level, control module **3510** may dynamically find and apply a new voltage and/processing clock setting that can satisfy the real-time processing requirements for the current receiver and transmitter selections.

In some aspects, user-implemented power schemes may also be incorporated. For example, a user of terminal device **1502** may be able to select a performance setting that affects operation of terminal device **1502.** If the user selects e.g., a high performance setting, terminal device **1502** may avoid (or may never) select to use a low power transmitter or receiver and may only select high-performance transmitters and/or receivers.

In some aspects, terminal device **1502** may locally implement receiver and transmitter selection techniques described above and may not require direct cooperation with the radio access network to implement these techniques. However, cooperation with the radio access network may impart additional aspects to terminal device**1502** with respect to power consumption control.

For example, in some aspects control module **3510** may periodically check the power level of power supply **1618** to determine whether the current power level is below a threshold, e.g., low power. Control module **3510** may then evaluate the possible receiver and transmitter selections for the current power level and, based on the possible selections, may select a preferred scheduling pattern that may optimize power saving. For example, in the downlink direction such may include identifying a candidate downlink resource block scheduling pattern (and likewise in the uplink direction). Control module **3510** may then transmit this candidate downlink resource block scheduling pattern to the radio access network, e.g., network access node **1510.** Network access node **1510** may then evaluate the requested candidate downlink resource block scheduling pattern and either accept or reject the requested candidate downlink resource block scheduling pattern via a response to control module **3510.** If accepted, control module **3510** may perform downlink reception according to the requested candidate downlink resource block scheduling pattern. If rejected, control module **3510** may propose a new candidate downlink resource block scheduling pattern and continue until a candidate downlink resource block scheduling pattern is agreed upon with network access node **1510.**

In some aspects, the candidate downlink resource block scheduling pattern requested by control module **3510** may be specifically selected based on the selected receiver and/or transmitter configurations. For example, the candidate downlink resource block scheduling pattern may be biased for either leakage or dynamic power saving depending on the power sensitivity of the selected receiver and/or transmitter configurations. For example, if the selected receiver is leakage-power sensitive, control module **3510** may request a scheduling pattern that schedules as many RBs as possible in a short duration of time (e.g., a frequency-dense pattern that fits the RB allocation into a few OFDM symbols at the beginning of a TTI). Such may allow terminal device **1502** to complete downlink processing at the selected receiver and power the receiver down for the remaining duration of each TTI. Alternatively, if the selected receiver is dynamic-power sensitive, control module **3510** may request a scheduling pattern that allocates a sparse amount of RBs in frequency over an extended period of time (e.g., multiple TTIs), which may allow control module **3510** to reduce the processing clock rate and potentially the voltage setting, which is proportional to the dynamic power consumption squared. Control module **3510** may similarly handle candidate uplink resource block scheduling patterns for the selected transmitter. Other scheduling patterns may combine uplink and downlink activity, such as an exemplary LTE scenario with 8 HARQ processes in which waking up every 4 TTI, for example, would be optimal as two uplink and downlink HARQ processes would be aligned.

FIG. **43** shows method **4300** of operating a communication system according to some aspects of an aspect of the disclosure. As shown in FIG. **43,** method **4300** includes identifying a target operational change of the communication system based on a current radio condition and a current power supply status, wherein the target operational change is a performance adjustment or a power consumption adjustment **(4310).** Based on the target operational change, a configuration for the communication system from a plurality of configurations having different performance properties or different power consumption properties is selected **(4320).** Data is transmitted or received with the communication system arrangement according to the selected configuration **(4330).**

2.5 Power-Efficiency #5

According to another aspect of the disclosure, a terminal device may select different transmitters or receivers to apply to certain data streams, or 'data bearers', to satisfy requirements of the data bearers while optimizing power consumption. As each data bearer may have different requirements, certain high-importance data bearers may warrant more intensive reception processing, such as the application of advanced interference cancelation techniques, more decoder iterations, more accurate channel estimators, etc., that may incur a high power penalty at a terminal device. In contrast, data bearers of lower criticality may not need such extra processing in order to satisfy their respective requirements. Terminal devices may therefore select receivers to apply to different data bearers based on the performance of each receiver and the requirements of each data bearer. These aspects may be used with common channel aspects, e.g., a common channel may use a certain data bearer which may be received with a certain receiver to optimize power consumption.

A 'data bearer' may be logical data connection that bidirectionally transports data along a specific route through a communication network. FIG. **44** shows a RAT-generic example in accordance with some aspects. As shown in FIG. **44,** terminal device **1502** may utilize a radio access bearer (RAB) to communicate with a core network location of core network **4402** via network access node **1510.** Terminal devices such as terminal device **1502** may therefore communicate with various internal and external nodes of a communication network with such data bearers. For example, an LTE terminal device may communicate with an eNodeB with a radio bearer and with a Serving Gateway (SGW) of the LTE core network (EPC) with a Radio Access Bearer (RAB), which may be composed of the radio bearer and an S1 bearer between the eNodeB and the SGW. Terminal devices may communicate with external locations such as external data networks, or PDNs, with an Evolved Packet Service (EPS) bearer stretching from the terminal device to the PDN Gateway (PGW) and an external bearer connecting the PGW and the PDN. Such data bearers may be similarly provided and utilized in various different radio access technologies.

Terminal device **1502** may utilize a different data bearer for each data network to which terminal device **1502** is connected. For example, terminal device **1502** may have a default data bearer (e.g., a default EPS bearer in an LTE setting) that is connected to a default data network such as an internet network. Terminal device **1502** may have additional dedicated data bearers (e.g., dedicated EPS bearers) to other data networks such as IMS servers used for voice and other data networks utilized for video, file download, push messaging, background updates, etc., multiple of which may be active at a given time. Each data bearer may rely on specific protocols and have specific Quality of Service (QoS) requirements, which may include data performance parameters such as guaranteed data rate, maximum error rate, maximum delay/latency, etc. Accordingly, certain data bearers, such as voice traffic data bearers (e.g., to IMS services for Voice over LTE (VoLTE)), may have higher QoS requirements than other data bearers. Each data bearer may be assigned a QoS priority (e.g., priority levels assigned by QoS Class Identifier (QCI) in the case of LTE) that assigns relative priorities between different data bearers.

Data bearers with high QoS priority, such as critical data, IMS data, conversational voice and video, etc., may therefore call for more intensive receiver processing than lower priority data bearers. As intensive receiver processing generally incurs a higher power penalty, received data from high priority data bearers may be identified and received data from lower priority data bearers may be identified, so as to subsequently process the high priority data with intensive receivers while processing the low priority data with low-power receivers. Such may allow terminal devices to optimize power consumption while still meeting the QoS requirements of each data bearer.

FIG. **45** shows an internal configuration of terminal device **1502** according to another aspect of the disclosure power (where other components of terminal device **1502** may be omitted from FIG. **45** for clarity). As shown in FIG. **45,** terminal device **1502** may receive radio signals via antenna system **1602** and provide the resulting signals to RF transceiver **1604** for RF demodulation. RF transceiver **1604** may provide the resulting PHY level (baseband) data to baseband modem **1606** for PHY and protocol stack processing by baseband modem **1606,** which as shown in FIG. **45** may include mapping module **4502,** receiver **4504,** receiver **4506,** receiver **4508,** and combiner module **4510.** Similar to receivers noted above, receivers **4504, 4506,** and **4508** may either be physically distinct receivers (e.g., separate physical hardware structures) or may be different configurations of one or more physical receivers (e.g., the same physical hardware with different parameters and/or software -defined components). Regardless, the reception processing of receivers **4504, 4506,** and **4508** may be different and each of receivers **4504, 4506,** and **4508** may therefore have varying performance and power consumption characteristics. Mapping module **4502** may be configured with the same capabilities as previously described regarding control module **3510,** and therefore may be able to dynamically configure a single physical receiver with various different configurations in order to realize receivers **4504, 4506,** and **4508.** Although RF transceiver **1604** and antenna system **1602** are shown separately from receivers **4504, 4506,** and **4508,** in some aspects receivers **4504, 4506,** and **4508** may be implemented as antenna, RF, PHY, and/or protocol stack level components.

As indicated above, terminal device **1502** may identify data of certain data bearers and map such data to specific receivers according to the QoS requirements of each data bearer. Accordingly, mapping module **4502** may be configured to receive data provided by RF transceiver **1604** and to map such data to receivers **4504, 4506,** and **4508** based on the QoS requirements of the associated data bearer. Although described on a functional level herein, in some aspects mapping module **4502** may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware) stored in a non-transitory computer-readable storage medium, or as a mixed hardware-defined and software-defined module. Skilled persons will appreciate the possibility to embody mapping module **4502** in software and/or hardware according to the functionality described herein.

As denoted in FIG. **45,** in some aspects mapping module **4502** may receive bearer information and power data as inputs. The power data may be provided by a component such as power consumption module **3512,** and may accordingly specify current power consumption and current battery power levels of power supply **1618.** As further described below, the bearer information may be provided by a higher-layer control component, such as controller **1610** or a PHY controller of physical layer processing module **1608.**

The bearer information may identify on a PHY level which data received by mapping module **4502** from RF transceiver **1604** is part of each data bearer. Accordingly, mapping module **4502** may receive a stream of PHY data from RF transceiver **1604** and be able to determine on a bit-level which data is part of each data bearer. For example, terminal device **1502** may currently have an active default data bearer (associated with e.g., an internet connection) and one or more active dedicated data bearers (associated with e.g., a voice call or other IMS services). Accordingly, the data stream provided by RF transceiver **1604** may contain data from all active data bearers multiplexed onto a single data stream.

Using the bearer information, mapping module **4502** may be able to identify which parts of the data stream (on a bit level) are associated with each data bearer. The bearer information may also indicate the priority of each data bearer, which may accordingly inform mapping module **4502** of the QoS requirements of each data bearer. For example, a first data bearer may be an IMS data bearer (e.g., LTE QCI 5 with priority 1), a second data bearer may be a live video streaming data bearer (e.g., LTE QCI 7 with priority 7), and a third data bearer may be a default data bearer (e.g., LTE QCI 9 with a priority 9). Accordingly, the first data bearer may have the highest QoS requirements while the third data bearer may have the lowest QoS requirements.

A terminal device may simply process the entire PHY data stream, e.g., all data bearers, with a single receiver, such as by utilizing a receiver that has high enough performance to meet the QoS requirements of the highest priority data bearer, e.g., the first data bearer. While the first data bearer may require such high-performance receiver processing to meet the QoS requirements, such may over-exceed the QoS requirements of the remaining data bearers. As receiver power consumption typically scales with performance requirements, such may yield unnecessarily high power consumption.

Terminal device **1502** may thus instead utilize mapping module **4502** to map data for each data bearer to an appropriate receiver, thus meeting the QoS requirements of each data bearer and optimizing power consumption. For example, receiver **4504** may be a high-performance receiver that meets the QoS requirements of the first data bearer, receiver **4506** may be a medium-performance receiver that meets the QoS requirements of the second data bearer, and receiver **4508** may be a lower-performance receiver that meets the QoS requirements of the third data bearer (where the performance levels of each of receivers **4504, 4506,** and **4508** may arise from factors as described above, including e.g., different decoders, different equalizers, different filter lengths, different channel estimation techniques, different interference cancelation techniques, different noise cancelation techniques, different processing bit width, different clock frequencies, different component voltages, different packet combination techniques, different number of algorithmic iterations, different usage of iterative techniques in or between components, etc.). For example, high performance receivers such as receiver **4504** may utilize receiver enhancements (e.g., interference cancelation, equalizers, etc.) and/or have higher complexity (e.g., longer FIR filters, more decoder iterations, larger processing bit width, etc.) than low performance receivers.

As receiver **4504** has the highest performance, receiver **4504** may also have the highest power consumption. Accordingly, instead of processing each of the data bearers at receiver **4504,** terminal device **1502** may process the second data stream at receiver **4506** and the third receiver stream at receiver **4508.** The QoS requirements of each data bearer may thus be met and, due to the use of lower-power receivers **4506** and **4508,** power consumption may be reduced. Although described with specific numbers of data bearers and receivers in FIG. **45,** this is demonstrative and can be scaled to any number of data bearers and receivers, where each receiver may process one or more data bearers for which each receiver meets the QoS requirements. In certain cases, there may be fewer receivers than data bearers. Accordingly, mapping module **4502** may map the data from each data bearer to the lowest-power receiver that meets the QoS requirements of each data bearer.

Each of receivers **4504, 4506,** and **4508** may then perform the respective processing on the received data streams provided by mapping module **4502.** In aspects where receivers **4504, 4506,** and **4508** are separate physical receivers, receivers **4504, 4506,** and **4508** may be able to perform the respective processing simultaneously in parallel. Alternatively, in aspects where one or more of receivers **4504, 4506,** and **4508** are different configurations of the same shared physical receiver, the shared physical receiver may process the respectively received data streams sequentially by adjusting its configuration according to each receiver in a serial fashion. Receivers **4504, 4506,** and **4508** may either have fixed configurations or may be adaptable. For example, a control module may adapt the configuration at one or more of receivers **4504, 4506,** and **4508** to tailor the performance of receivers **4504, 4506,** and **4508** by adjusting the configuration to match the QoS requirements of a given data bearer.

Following receiver processing according to their respective configurations, receivers **4504, 4506,** and **4508** may then provide the respective processed output streams to combiner module **4510,** which may combine the respective processed output streams to form a single data stream. In some aspects, combiner module **4510** may be a digital parallel-to-serial converter configured to combine the received digital data streams into a serial data stream. Combiner module **4510** may then pass the resulting data stream to other components of baseband modem **1606** for further downlink processing. For example, mapping module **4502,** receivers **4504, 4506,** and **4508,** and combiner module **4510** may all be included in physical layer processing module **1608.** Combiner module **4510** may then pass the output data stream to other components of physical layer processing module **1608** for further PHY-level processing and subsequent provision to the protocol stack layers of controller **1610.**

The bearer information received by mapping module **4502** may therefore specify which data (e.g., on a bit-level) are connected to which data bearer. As the processing of receivers **4504, 4506,** and **4508** may generally be done at the PHY level, mapping module **4502** may need to be able to discern which data is related to each data bearer at the PHY level, e.g., at physical layer processing module **1608.** Mapping module **4502** may additionally be able to identify the QoS requirements of each data bearer. However, such data bearer information may not be available in radio access technologies such as LTE; for example, according to the LTE standard, LTE protocol stack layers (e.g., at controller **1610** and counterpart layers at the radio access network) may generate physical layer transport blocks that do not specify which data bearer the data is connected to. In other words, only higher layers in the protocol stack may be aware of which data is tied to which data bearer and consequently of the QoS requirements of each data bearer. Such may hold for other radio access technologies.

Accordingly, according to some aspects network cooperation may be relied on to provide mapping module **4502** with bearer information that specifies which data is connected to which data bearer and the associated QoS requirements of each data bearer. As described below, several options for network cooperation may provide mapping module **4502** with appropriate bearer information.

For example, in some aspects the radio access network may signal the bearer information in downlink grants, which may enable mapping module **4502** to receive each downlink grant and appropriately map the related data to receivers **4504, 4506,** and **4508.** For example, in an LTE setting, network access node **1510** of FIG. **44** may provide downlink grants in the form of PDCCH DCI messages during each TTI. In addition to the existing information provided in such downlink grants, network access node **1510** may additionally provide bearer information that both identifies which data in the upcoming TTI is connected to which data bearer in addition to the QoS requirements of each data bearer. Terminal device **1502** may therefore decode each downlink grant to identify the bearer information for upcoming TTIs and provide the bearer information to mapping module **4502** for subsequent application in mapping incoming downlink data to receivers **4504, 4506,** and **4508.** In some aspects, such may involve a PHY controller of physical layer processing module **1608** and/or a protocol-stack layer component (e.g., software-defined) of controller **1610** processing downlink grants to identify the bearer information and subsequently providing the bearer information to mapping module **4502.**

As previously indicated, in some aspects receivers **4504, 4506,** and **4508** may be implemented at separate physical receivers or at one or more shared physical receivers (e.g., where two or more of receivers **4504-4508** are implemented at the same physical receiver; in some aspects, other receivers may also be implemented at separate physical receivers concurrent with operation of the one or more shared physical receivers). In the shared physical receiver case, the shared physical receiver may need to be sequentially reconfigured to meet the performance requirements of each data bearer. Accordingly, the downlink data connected to each downlink grant provided by network access node **1510** may be slightly delayed in order to enable the shared physical receiver to switch between the configurations of receivers **4504, 4506,** and **4508.** Additionally, in some aspects the radio access network may be able to selectively activate and deactivate this feature (e.g., via higher layer reconfiguration control messages), such as in order to support data bearers with high throughput requirements that cannot tolerate the throughput loss resulting from the switching latency. If the network bearer information provision feature is deactivated, terminal device **1502** may fall back to conventional operation in which all incoming downlink data is processed with a single receiver that meets the QoS requirements of the highest priority data bearer.

Network access node **1510** may be configured in the same manner as network access node **2002** depicted in FIG. **26.** In order to facilitate the provision of bearer information to terminal device **1502,** network access node **1510** may need to identify the relevant bearer information and transmit the bearer information to terminal device **1502.** In accordance with the above-described case in which bearer information is included in downlink grants (e.g., DCI messages), control module **2610** may identify the bearer information for the downlink data addressed to terminal device **1502** and include such information in downlink grants. As such bearer information may not conventionally be available at the PHY layer, control module **2610** may need to provide bearer information to physical layer module **2608,** which physical layer module **2608** may then include in downlink grants. Network access node **1510** may then transmit such downlink grants via radio module **2604,** and antenna **2602** as previously described.

FIG. **46** shows a graphical depiction of the operation of mapping module **4502** and receivers **4504** and **4506** in accordance with some aspects. As shown in FIG. **46,** terminal device **1502** may receive downlink data as indicated in data grid **4610,** which may span three TTIs and be composed of downlink data belonging to a high priority data bearer and a low priority data bearer. Mapping module **4502** may receive the PHY-level data from RF transceiver **1604** along with the bearer information (obtained e.g., within a downlink grant provided by network access node **1510)** that identifies which data belongs to which bearer and the QoS requirements of each data bearer. Mapping module **4502** may then identify the data belonging to the high priority data bearer and provide this data to receiver **4504,** which may be a high performance receiver that meets the QoS requirements of the high priority data bearer. Mapping module **4502** may additionally identify the data belonging to the low priority data bearer and provide this data to receiver **4506,** which may be a lower performance receiver with lower power consumption that meets the QoS requirements of the low priority data bearer. Receivers **4504** and **4506** may then perform receiver processing according to their respective configurations on the provided data, which may result in receivers **4504** and **4506** processing downlink data as respectively shown in data grids **4620** and **4630.** Accordingly, as shown in data grids **4620** and **4630,** receiver **4504** may process the data from the high priority data bearer during each TTI while receiver **4506** may process the data from the low priority data bearer during each TTI. The QoS requirements of each data bearer may therefore be met while allowing receiver **4506** to utilize a lower-power configuration, thus optimizing power consumption.

Additionally or alternatively, in some aspects network access node **1510** may use a carrier aggregation scheme to enable mapping module **4502** to map the data from each data bearer to an appropriate receiver. Accordingly, where e.g., two carriers are available for downlink transmissions from network access node **1510** to terminal device **1502,** network access node **1510** may allocate the data from a first data bearer onto a first carrier and allocate the data from a second data bearer onto a second carrier. Mapping module **4502** may therefore provide the data from the first carrier to a receiver that meets the QoS requirements of the first data bearer and provide the data from the second carrier to another receiver that meets the QoS requirements of the second data bearer.

FIG. **47** shows a graphical depiction of the operation of terminal device **1502** in accordance with some aspects of a carrier aggregation network cooperation scheme introduced above. As shown in data grid **4702,** a first carrier of the carrier aggregation scheme may contain data for a low priority data bearer while a second carrier of the carrier aggregation may contain data for a high priority data bearer. Such may rely on cooperation from network access node **1510,** which may be responsible in a carrier aggregation scheme for allocating data to each carrier. Accordingly, network access node **1510** may identify which data intended for terminal device **1502** is connected to high priority data bearers and which data intended for terminal device **1502** is connected to low priority data bearers. As such information may conventionally be available at protocol stack layers, control module **2610** may provide physical layer module **2608** with bearer information that specifies which data is connected to which data bearers. Physical layer module **2608** may then utilize such bearer information to identify which data is connected to high priority data bearers and which data is connected to low priority data bearers. Physical layer module **2608** may then transmit the low priority data on the first carrier and the high priority data on the second carrier as shown in data grid **4702** of FIG. **47.**

Terminal device **1502** may then receive both the first carrier and the second carrier according to the carrier aggregation scheme. Although not explicitly reflected in FIG. 45, in some aspects carrier aggregation compatibility may require more complex reception functionality at antenna system **1602,** RF transceiver **1604,** and baseband modem **1606** to receive and process both carriers simultaneously. For example, there may be separate 'duplicate' receive chains that are each dedicated to a separate carrier. There may also be a coordination function on top of the receive chains to oversee coordinated operation between the receive chains. In some aspects of merged approaches where the receive chains for multiple carriers are fully or partially merged, the coordination function may be needed to ensure that the data is processed correctly. Accordingly, receivers **4504-4508** may be controlled by a coordination function that coordinates reception of data by receivers **4504-4508** on the various carriers. In some aspects, there may be additional self-interference cancellation components that manage the interference from the transmit chain to the receive chain.

After receiving both carriers, mapping module **4502** may map the received data to receivers **4504** and **4506** for subsequent reception processing. As the first carrier contains data from a low priority data bearer and the second carrier contains data from a high priority data bearer, mapping module **4502** may route the data received on the first carrier to receiver **4506** (which as indicated above may be lower-performance and lower power than receiver **4504)** and route the data received on the second carrier to receiver **4504.** Terminal device **1502** may therefore meet the QoS requirements of both data bearers while conserving power through the use of lower-power receiver **4506** to process the low priority data bearer.

As opposed to the case described above regarding FIG. **46** where mapping module **4502** receives bearer information that specifies which data is connected to which data bearer on a bit-level, in some aspects mapping module **4502** may only require bearer information that specifies which carrier contains data for the high priority data bearer and which carrier contains data for the low priority data bearer. Accordingly, the bearer information provided by network access node **1510** in the case of FIG. **47** may be simplified and/or be provided less frequently.

In various aspects, network access node **1510** and terminal device **1502** may also employ further cooperation techniques to conserve power at terminal device **1502.** As shown in data grid **4802** of FIG. **48,** in some aspects network access node **1510** may delay transmission of data for low-priority data bearers to enable terminal device **1502** to power down receiver components more often. Accordingly, control module **2610** of network access node **1510** may provide physical layer module **2608** with bearer information that specifies which data is connected to high priority data bearers and which data is connected to low priority data bearers. Physical layer module **2608** may then allocate data intended for terminal device **1502** in time to provide terminal device **1502** with more receiver inactivity periods. As data connected to a low priority data bearer may have less restrictive latency requirements, network access node **1510** may be able to slightly delay (depending on the latency QoS requirements) data for the low priority data bearer in order to create more receiver inactivity periods. As shown in data grid **4802,** network access node **1510** may delay transmission of such data to align the low priority data in time with the high priority data. Accordingly, as opposed to activating receivers **4504** and **4506** for e.g., two consecutive time slots, terminal device **1502** may only activate receivers **4504** and **4506** for e.g., one time slot in which data for both the low priority and high priority data bearers is received. Terminal device **1502** may deactivate receivers **4504** and **4506** (e.g., place in a power saving state) during the resulting receiver inactivity periods, thus conserving more power. In some aspects, the ability of network access node **1510** to delay low priority data to align the low priority data with high priority data in time may depend on the latency requirements and the separation in time between the low priority data and the next scheduled high priority data. For example, network access node **1510** may be able to delay low priority data for e.g., one or two time slots (depending on the latency requirements) but may not be able to further delay the low priority data. Accordingly, network access node **1510** may only be able to align low priority data with high priority data if the high priority data is scheduled for one or two time slots following the low priority data. As in the case of FIG. **46,** network access node **1510** may provide detailed bearer information to enable mapping module **4502** to route data from high and low priority bearers to the proper receivers. In addition to the latency and time scheduling constraints on network access node **1510,** each time slot may have limited bandwidth for transmitting data to terminal device **1502.** As shown at **4804** of data grid **4802,** there may already be a large amount of high priority data scheduled for certain time slots which may prevent network access node **1510** from being able to align low priority data on the same time slot. Accordingly, if the cumulative bandwidth of the scheduled high priority data and the low priority data exceeds a bandwidth limit for a given time slot, network access node **1510** may not be able to delay the low priority data to align the low priority data with scheduled high priority data.

As data grid **4802** may include data from the high priority data bearer and the low priority data bearer on the same carrier in the same time slot, in some aspects the bearer information may specify in detail which data is connected to the high priority data bearer and which data is connected to the low priority data bearer. Alternative to the case of data grid **4802,** if low priority data does not fit in the immediately succeeding time slot, network access node **1510** may schedule transmission of the low priority data on the next upcoming time slot that can fit the low priority data. FIG. **49** shows an example in data grid **4902,** where at **4904** network access node **1510** may determine that the low priority data will not fit in the immediately succeeding time slot. Instead of transmitting the low priority data on the originally scheduled time slot, network access node **1510** may continue to delay the low priority data until the next time slot that has space for the low priority data, e.g., a delay of two time slots in the exemplary case of FIG. **49.** In some aspects, network access node **1510** may consider delays of the low priority data based on the latency requirements of the low priority data, and accordingly may in some cases only consider delays of the low priority data within a certain number of time slots.

Alternative to the cases of data grids **4802** and **4902,** in some aspects network access node **1510** may schedule transmission of data for the high priority and low priority data bearers so that each time slot contains data exclusively for one of the data bearers. As shown at **5004** of data grid **5002** in FIG. **50,** network access node **1510** may delay data for the low priority data bearer to align the low priority data with other scheduled low priority data. Accordingly, each time slot may exclusively contain data for one data bearer (or alternatively contain data for data bearers of equivalent or similar QoS requirements). As noted above, the ability of network access node **1510** to perform such scheduling adjustments may depend on the latency requirements of the low priority data bearer, the time separation between low priority data and the next scheduled low priority data, and the bandwidth limit.

The case of data grid **5002** may simplify the bearer information that network access node **1510** provides to mapping module **4502.** Instead of providing bearer information that specifies which data is connected to which data bearer, network access node **1510** may instead provide bearer information that specifies which data bearer an entire time slot is connected to. In other words, instead of specifying on a bit-level which data of each time slot is connected to which data bearer (as in the case of data grid **4802),** the bearer information provided by network access node **1510** may instead specify which data bearer is connected to each time slot. Mapping module **4502** may then route data received in time slots containing high priority data to receiver **4504** and route data received in time slots containing low priority data to receiver **4506.**

FIG. **51** shows another scenario in which network access node **1510** and terminal device **1502** may cooperate to conserve power at terminal device **1502** by using a single carrier as opposed to multiple carriers. As operation of carrier aggregation schemes may involve more complex reception processing than single carrier schemes, terminal device **1502** may consume more power when employing carrier aggregation. Network access node **1510** may therefore cooperate with terminal device **1502** to utilize a single carrier to provide high and low priority data bearers whenever possible.

As shown in data grid **5102,** there may be scenarios such as **5104** and **5106** in which the amount of downlink data for terminal device **1502** may exceed bandwidth limits for a single carrier. Instead of allocating data onto a second carrier, network access node **1510** may instead adjust the scheduling of downlink data to enable terminal device **1502** to continue using a single carrier.

FIGs. **52** and **53** show two different solutions that network access node **1510** can utilize to allow for continued single carrier usage in accordance with some aspects. As shown in data grid **5202** of FIG. **52,** network access node **1510** may delay data for a low priority data bearer to later time slots that have sufficient bandwidth headroom, e.g., that have enough remaining bandwidth capacity relative to the limit to fit low priority data from the time slots that exceed the bandwidth limit. As the low priority data bearer may have lower latency requirements, network access node **1510** may be able to delay the low priority data for several time slots while still meeting the latency requirements. As shown in data grid **5202,** the resulting schedule adjustment may fit the data from both the high and low priority data bearers within a single carrier and avoid the need to utilize a second carrier for terminal device **1502.** Network access node **1510** may similarly provide mapping module **4502** with bearer information for each time slot that identifies which data is connected to which data bearer on a bit-level, which mapping module **4502** may apply to route high priority data to receiver **4504** and low priority data to receiver **4506.**

In some aspects, network access node **1510** may reduce the error protection on low priority data in order to reduce the total number of encoded bits for the low priority data, thus enabling network access node **1510** to fit data for both the high priority and low priority data bearers on a single carrier. More specifically, the data for both the high priority and low priority data bearers may be encoded with a channel coding scheme to provide for error correction and/or error checking (e.g., Turbo coding and Cyclic Redundancy Check (CRC) in an LTE setting). While lower coding rates (e.g., more coding bits) may provide better error protection, the resulting increase in coding bits may require greater bandwidth.

However, as the low priority data bearer may have a less restrictive error rate requirement than the high priority data bearer, network access node **1510** may be able to increase the coding rate of the low priority data to compress the size of the low priority data. The reduction in data size may then enable network access node **1510** to fit the data from both the high and low priority data bearers onto a single carrier. As shown in data grid **5302,** network access node **1510** may therefore identify the time slots which exceed the bandwidth limit and increase the coding rate of the low priority data to a degree that the data fits within the bandwidth limit. As network access node **1510** may only increase the coding rate for certain time slots that exceed the bandwidth limit, the low priority data in the remaining time slots may have sufficient error protection to still meet the error rate requirements of the low priority data bearer. Network access node **1510** may avoid adjustments to the data of the high priority data in order to ensure that the QoS requirements of the high priority data bearer are maintained.

With respect to performing the coding rate adjustments, in some aspects control module **2610** may provide bearer information to physical layer module **2608,** which physical layer module **2608** may utilize to identify time slots that exceed the bandwidth limit and to increase the coding rate for low priority data in such time slots to meet the bandwidth limit. Physical layer module **2608** may then provide terminal device **1502** with bearer information that specifies the bit-wise locations of high priority and low priority data in each time slot. Mapping module **4502** may then apply the bearer information to route the high priority data to receiver **4504** and the low priority data to receiver **4506.**

As the increased coding rate for the low priority data may decrease error protection, in some aspects terminal device **1502** may also in certain cases increase the performance of the low performance receiver **4506** (or utilize a slightly higher performance receiver) to help ensure that the error rate requirements of the low priority data bearer are still met. Accordingly, if mapping module **4502** receives bearer information from network access node **1510** that indicates that the coding rate for the low priority data bearer has been increased, mapping module **4502** may select a slightly higher performance receiver than would be used for low priority data with a standard coding rate. While such may also slightly increase power consumption of terminal device **1502,** this may be offset by the power savings from using a single carrier.

While described individually in FIGs. **46-53,** multiple of these cooperation techniques may be employed in combination by network access node **1510** and terminal device **1502.** Additionally, while FIGs. **46-53** show more than one receiver, mapping module **4502** may utilize any number of different receivers that may either be fixed or dynamically configurable, e.g., based on the QoS requirements of the data bearers. Any number of data bearers with varying QoS requirements and associated priorities may additionally be employed.

Mapping module **4502** may additionally be configured to consider power and radio condition status data in the same nature as control module **3510.** For example, mapping module **4502** may be configured to utilize higher performance receivers in poor radio conditions, lower power and lower performance receivers in strong radio conditions, and low power receivers in low battery power conditions. Mapping module **4502** may be configured to implement such features while ensuring that the QoS requirements of each data bearer are met.

In addition to the downlink cases related to receivers described above, in some aspects terminal device **1502** may additionally be configured in the uplink direction to utilize specific transmitters for different uplink data bearers. As in the downlink case, terminal device **1502** may additionally be responsible for maintaining uplink data bearers, where the uplink data bearers may have specific QoS requirements (which may differ from the QoS requirements of the counterpart downlink data bearer). In some cases, the uplink data bearers may run counterpart to downlink data bearers, e.g., may form the other direction of a bidirectional link between terminal device **1502** and a network node, while in other cases terminal device **1502** may have unidirectional data bearers in the uplink and/or downlink direction that do not have a counterpart data bearer in the other direction. Instead of utilizing a transmitter configuration that meets the QoS requirements of the highest data bearer, terminal device **1502** may instead selectively map data from each data bearer to a specific transmitter that meets the QoS requirements of each data bearer. By utilizing lower power transmitters for lower priority data bearers, terminal device **1502** may improve power efficiency while still meeting the QoS requirements of each data bearer.

FIGs. **54A** and **54B** show exemplary internal configurations of terminal device **1502** according to an aspect of the disclosure with respect to the uplink direction. The depictions illustrated in FIGs. **54A** and **54B** may omit certain other components of terminal device **1502** not directly related to the current aspect with respect to the uplink direction. For example, baseband modem **1606** may additionally include the downlink-direction components shown in FIG. **45.**

As shown in FIGs. **54A** and **54B,** in various aspects terminal device **1502** can combine transmitter outputs prior to RF modulation (FIG. **54A)** or with combining of transmitter outputs after RF modulation (FIG. **54B).** In both cases, and similar to the case of FIG. **36** described detailed above, transmitters **5404, 5406,** and **5408** in FIG. **54A** may in various aspects be physically distinct transmitters (e.g., separate physical hardware structures) or may be different configurations of one or more physical transmitters (e.g., the same hardware with different parameters and/or software-defined instructions for execution). Regardless, the transmission processing for each of transmitters **5404, 5406,** and **5408** may be different and each of transmitters **5404, 5406,** and **5408** may therefore have varying performance and power consumption characteristics. Mapping module **5402** can be configured with the same or similar capabilities as previously described regarding control module **3510,** and therefore may be able to dynamically configure a single physical transmitter with various different configurations to realize transmitters **5404, 5406,** and **5408.**

Mapping module **5402** may therefore route data for a plurality of data bearers to transmitters **5404, 5406,** and **5408** based on the QoS requirements of the data bearers and the performance and power efficiency of transmitters **5404, 5406,** and **5408.** For example, mapping module **5402** may route the data for each respective data bearer to the lowest-power transmitter that meets the QoS requirements of the respective data bearer.

In the case of FIG. **54A,** transmitters **5404, 5406,** and **5408** may then perform transmission processing on such data according to their respective configurations and provide the resulting processed data to combiner **5410a.** Combiner **5410a** may combine the received data into a single stream and provide the single data stream to RF transceiver **1604** and antenna system **1602** for RF processing and transmission. Although RF transceiver **1604** and antenna system **1602** are shown separately from transmitters **5404, 5406,** and **5408,** transmitters **5404, 5406,** and **5408** may be implemented as antenna, RF, PHY, and/or protocol stack level components.

In the case of FIG. **54B,** transmitters **5404, 5406,** and **5408** may then perform transmission processing on such data according to their respective configurations and provide the resulting processed data to RF transceivers **1604a, 1604b,** and **1604c,** respectively. RF transceivers **1604a-1604c** may then perform RF processing and modulation on the data received from transmitters **5404-5408** and provide the resulting RF signals to combiner **5410b,** which may then combine the received RF signals into a single RF signal and provide the single RF signal to antenna system **1602** for transmission (although there may be additional components between combiner **5410** and antenna system **1602,** such as power amplifier components). In some aspects, combiner **5410a** may be configured for baseband data combination while combiner **5410b** may be configured for RF signal combination. Although shown separately from transmitters **5404-5408** in FIG. **54B,** in some aspects RF transceivers **1604a-1604c** can be implemented as part of transmitters **5404-5408,** such as e.g., RF transmitters configured to perform different RF modulation in accordance with a specific RF configuration of transmitters **5404-5408.**

In both cases of FIG. **54A** and **54B,** mapping module **5402** may perform the data routing based on bearer information that may be available locally at terminal device **1502.** For example, the bearer information, e.g., the QoS requirements and the bit-level location of data for each bearer, may be available at the protocol stack layer at controller **1610** and/or the application layer at an application processor (e.g., data source **1612**/data sink **1616).** Accordingly, such upper layers may provide the bearer information to mapping module **5402,** which may then route data to transmitters **5404, 5406,** and **5408** based on the QoS requirements of each data bearer and the performance and power efficiency level of transmitters **5404, 5406,** and **5408.**

Terminal device **1502** may therefore also conserve power during transmission by using lower power transmitters that still meet the QoS requirements of the data bearers. Aspects of this disclosure may therefore provide for power efficiency in both reception and transmission by enabling terminal device **1502** to selectively apply receivers and transmitters based on the QoS requirements of data bearers. Terminal device **1502** may additionally employ any of the bearer mapping techniques described in FIGs. **47-53** in the uplink direction.

FIG. **55** shows method **5500** of performing radio communications in accordance with some aspects of the disclosure. As shown in FIG. **55,** method **5500** includes receiving a data stream comprising first data of a first data bearer and second data of a second data bearer **(5510).** A first communication module is selected from a plurality of communication modules for the first data bearer based on a quality requirement of the first data bearer and a performance level of the first communication module **(5520).** A second communication module is selected from the plurality of communication modules for the second data bearer based on a quality requirement of the second data bearer and a performance level of the second communication module **(5530).** First data from the first data bearer is processed with the first communication module and second data from the second data bearer is processed with the second communication module **(5540).**

FIG. **56** shows method **5600** of performing radio communications according to an aspect of the disclosure. As shown in FIG. **56,** method **5600** includes identifying first data for a first data bearer of a terminal device and second data for a second data bearer of the terminal device **(5610).** A physical layer data stream is generated by allocating the first data and the second data in the physical layer data stream based on quality requirements of the first data bearer and the second data bearer **(5620).** The physical layer data stream and a physical layer message are transmitted to the terminal device **(5630),** such that the physical layer message specifies the allocation of the first data and the second data within the physical layer data stream.

Aspects discussed herein generally relate to power savings at terminal devices, which is a consideration due to the finite power supply (e.g., battery-powered) of many terminal devices (although not all terminal devices may be exclusively battery powered). However, power efficiency may additionally be a notable characteristic of network access nodes in order to reduce operational costs. In particular, access nodes such as base stations and access points may be able to reduce operating costs for network operators by employing power-efficient architectures and techniques to reduce power consumption. The aforementioned techniques to map lower priority data bearers to lower performance receivers and transmitters, or techniques to schedule and delay lower priority data packets in order to obtain TTIs where receivers or transmitters can be turned off completely, or techniques where the code rate of lower priority data bearers is increased in order to avoid that a secondary component carrier and its associated receivers and transmitters have to be activated may allow to reduce power consumption of network access nodes., and various other techniques such as wake/sleep cycles, frequency scaling, and traffic/task concentration (less fragmented wake/sleep cycles). In various aspects, network access nodes may be configured with advanced power management architecture, such as where the processing infrastructure of the network access node has a predefined set of ‘power states’ where each power state has a predefined level of power consumption and processing capability (e.g., the ability to support a given processing demand). The lower performance receivers and transmitters for the lower priority data bearers may have lower processing demand and turning off or de-activating receivers or transmitters temporarily reduces the average processing demand. An advanced power management architecture in a network access node may allow to reduce power consumption of network access nodes in phases of lower processing demand.

## 2.6 Power-Efficiency #6

According to another aspect of this disclosure, a network processing component (at a network access nodes or in the core network) may utilize duty cycling in order to concentrate data traffic into ’active’ phases while entering a power-efficient state during ’inactive’ phases. The use of such power-efficient states during inactive phases may allow network processing components to reduce power consumption and consequently reduce operating costs. These aspects may be used with common channel aspects, e.g., a common channel may use certain duty cycling to reduce number, length and duration of ’active’ phases.

As previously described, network access nodes may serve as bidirectional intermediaries in providing downlink data to terminal devices and receiving uplink data from terminal devices. In the downlink direction, network access nodes may provide terminal devices with both external data received from the core network and data generated locally at the network access node, where the local data may generally be radio access control data and the external data may be user data and higher-layer control data. The network access node may therefore receive such external data from the core network over backhaul links, process and package the external data according to radio access protocols (which may include insertion of locally generated control data), and provide the resulting data to terminal devices over a radio access network. In the uplink direction, network access nodes may receive uplink data from terminal devices and process the received uplink data according to radio access protocols. Certain uplink data may be addressed to further destinations upstream (such as higher-layer control data addressed to core network nodes or user traffic data addressed to external data networks) while other uplink data may be addressed to the network access node as the endpoint (such as radio access control data). FIG. **44** depicts a general example of such uplink and downlink paths related to terminal device **1502,** network access node **1510,** and core network **4402.**

Accordingly, network access nodes such as base stations may perform processing in both the downlink and uplink directions according to the appropriate radio access protocols. Such may involve both physical layer and protocol stack layer processing, where network access nodes may process uplink and downlink data according to each of the respective layers in order to effectively utilize the radio access network to communicate with terminal devices.

The processing infrastructure at a network access node may be a combination of hardware and software components. FIG. **26** depicts a general architecture of a network access node, e.g., network access node **2002,** where communication module **2606** including physical layer module **2608** and control module **2610** may provide the processing infrastructure utilized for the aforementioned uplink and downlink processing.

In a 'distributed' base station architecture, network access node **2002** may be split into two parts: a radio unit and a baseband unit. Accordingly, antenna system **2602** and radio module **2604** may be deployed as a remote radio head (RRH, also known as a remote radio unit (RRU)), which may be mounted on a radio tower. Communication module **2606** may then be deployed as a baseband unit (BBU), which may be connected to the RRH via fiber and may be placed at the bottom of the tower or a nearby location.

Other base station architectures including base station hoteling and Cloud RAN (CRAN) may also be applicable. In base station hoteling, multiple BBUs serving different RRHs at different locations may each be physically placed in the same location, thus allowing for easier maintenance of multiple BBUs at a single location. As the RRHs may be located further from the counterpart BBUs than in a conventional distributed architecture, the BBUs may need to interface with the RRHs over long distances e.g., with fiber connections. CRAN may similarly control multiple RRHs from centralized or remote baseband processing locations involving a pooled or non-pooled architecture where infrastructure may or may not be virtualized. In essence, CRAN may dynamically deliver processing resources to any point in the network based on the demand on the network at that point in time. CRAN for 5G includes delivering slices of network resource and functionality delivering avenue for network slicing.

Regardless of whether communication module **2606** is located at a distributed or centralized location and/or implemented as a standalone BBU or in a server, communication module **2606** may be configured to perform the physical layer and protocol stack layer processing at physical layer module **2608** and control module **2610,** respectively. Control module **2610** may be implemented as a software-defined module and/or a hardware-defined module. For example, control module **2610** may include one or more processors configured to retrieve and execute software-defined program code that define protocol stack-layer functionality. In some aspects, control module **2610** may additionally include hardware components dedicated to specific processing intensive tasks, also known as 'hardware accelerators, which may be controlled by the processor(s) and used to implement certain tasks such as e.g., cryptography and encryption functions. Physical layer module **2608** may likewise be implemented as hardware-defined and/or software-defined module, such as e.g., one or more processors (e.g., a PHY controller) and/or one or more hardware accelerators for dedicated PHY-layer processing, such as Fast Fourier Transform (FFT) engines, Viterbi decoders, and other processing-intensive PHY-layer tasks. Any combination of full-hardware, full-software, or mixed-hardware/software for physical layer module **2608** and control module **2610** is within the scope of this disclosure. Due to the processing complexity, in some aspects the software portion of physical layer module **2608** and control module **2610** may be structurally implemented with a multi-core system, such as, for example, based on an Intel x86 architecture.

Physical layer module **2608** and control module **2610** may therefore handle the baseband processing tasks for both uplink and downlink communications. As previously described, downlink processing may include receiving user-addressed downlink data from the core network over a backhaul interface, processing and packaging the user-addressed downlink data with locally generated downlink data according to physical layer (physical layer module **2608)** and protocol stack (control module **2610)** radio access protocols, and providing the resulting downlink data to terminal devices via radio module **2604** and antenna system 2602. Uplink processing may include receiving uplink data from terminal device via antenna system **2602** and radio module **2604,** processing the received uplink data according to physical layer (physical layer module **2608)** and protocol stack (control module **2610)** radio access protocols to obtain locally-addressed and externally-addressed uplink data, and routing the externally-addressed uplink data to the core network over the backhaul interface.

Such uplink and downlink processing may require increased power expenditures at network access node **2002.** The power consumption of network access node **2002** related to uplink and downlink processing may directly depend on the traffic conditions of network access node **2002.** For example, if network access node **2002** is currently serving a large number of terminal devices with many in connected mode, communication module **2606** may need to perform a substantial amount of processing which may consequently require additional power expenditure. Conversely, if network access node **2002** is only serving a small number of terminal devices or most of the served terminal devices are in idle mode, communication module **2606** may only need to perform a small amount of processing, which may have lower power expenditure. Regardless of the current processing demands, communication module **2606** may additionally have some load-independent power consumption arising from the power needed to keep communication module 2606 on.

FIG. **57** depicts general examples of such power consumption by communication module **2606.** Data grid **5710** shows an exemplary resource block (RB) allocation over time (which may be either uplink or downlink in the exemplary setting of FIG. **57;** the shadings of data grid **5710** indicate RBs for three different terminal devices UE1, UE2, and UE3) while data grid **5730** shows the power consumption at communication module **2606.** As shown in data grids **5710** and **5730,** communication module **2606** may expend greater power during times when communication module **2606** needs to process a greater number of RBs. The power consumption related to actual active processing may be the load dependent energy consumption, which dynamically follows the traffic load envelope. The overall power consumption of communication module **2606** may also include load-independent power consumption, which may be relatively constant and result from the power needed to maintain the processing components (processors and hardware accelerators) of communication module **2606** in an active state. Continuous operation of communication module **2606** may, regardless of actual processing demand, expend at least the power related to the load-independent energy consumption.

Accordingly, an aspect of this disclosure may operate a network processing component such as the processing infrastructure of physical layer module **2608** and control module **2610** with a duty cycle composed of 'active' phases and 'inactive' phases, where the network processing component may fit all intensive processing during the active phases and perform no or minimal processing during inactive phases. As all intensive processing is fit into the active phases, the load dependent power consumption may be greater than the alternative case. However, the network processing component may avoid load independent power consumption during the inactive phases by entering into an inactive or minimally active state. Power consumption can therefore be reduced.

Data grids **5720** and **5740** illustrate an exemplary scenario according to an aspect of this disclosure. As communication module **2606** may be in control of scheduling decisions (e.g., may include a Media Access Control (MAC) scheduler), communication module **2606** may be able to schedule all traffic during an 'active' phase as shown in data grid **5720.** As shown in data grid **5720,** communication module **2606** may allocate all RBs during a first time period (the active phase) and allocate no RBs during a second time period (the inactive phase). While the load-dependent power consumption may be at high levels during the active phase of data grid **5740** (e.g., at a maximum power consumption level corresponding to the maximum processing capability indicated by the upper dotted line), communication module **2606** may power off during the inactive phase and thus have little or no power consumption. In some aspects, communication module **2606** may be 'disabled' as an alternative to powering off, e.g., may still have some power but may not be fully active or functionally operational. As communication module **2606** may be powered off or disabled, there may not be any (or may only be negligible) load-independent power consumption at communication module **2606,** thus resulting in power savings as indicated at **5742**. It is noted that in some aspects the active phase of the duty cycle used by communication module **2606** may not be exactly aligned in time with the allocated RBs as the processing by communication module **2606** may not be completed in real-time. Accordingly, the active phase of the duty cycle may end at a later time than the latest RB allocated to the active phase. Furthermore, in some aspects the active phase of the processing by communication module **2606** may have a longer duration than the allocated RBs in time as communication module **2606** may process the allocated RBs over a longer period of time than the allocated RBs occupy in time. While there may therefore exist differences in the duty cycle of the allocated RBs (e.g., active phases when many RBs are allocated and inactive phases when few RBs are allocated and the duty cycle of the processing by communication module **2606),** for purposes of simplicity the following description will refer to a single duty cycle that is common to both the allocated RBs and communication module **2606.**

According to an aspect of the disclosure, communication module **2606** may perform different functions, including determining an appropriate duty cycle based on traffic loads. For example, communication module **2606** may utilize longer active phases and shorter inactive phases in high traffic conditions (higher overall power consumption) while low traffic conditions may allow communication module **2606** to utilize shorter active phases and longer inactive phases (lower overall power consumption). Communication module **2606** may then utilize a power management framework to carry out the selected duty cycle scheme. In some aspects, communication module **2606** may also perform scheduling functions to allocate scheduled traffic (in both the downlink and uplink) into the active phases. Furthermore, in some aspects communication module **2606** may manage the inactive phases to support latency-critical traffic. For example, instead of utilizing an inactive phase in which communication module **2606** is completely powered down or disabled, communication module **2606** may employ a very low power 'always-on' state that has a limited amount of processing resources available to support latency-critical traffic such as voice data (thus avoiding having to delay such traffic until the next active phase).

FIG. **58** shows an internal diagram of network access node **2002** and communication module **2606** depicting components according to an aspect some aspects of the of this disclosure. Accordingly, FIG. **58** may omit certain components of network access node **2002** and communication module **2606** that are not related to this aspect. As shown in FIG. **58,** communication module **2606** may include traffic monitoring module **5802,** hardware/software (HW/SW) power management module **5804,** activity control module **5806,** scheduler module **5808,** and processing infrastructure **2608/2610** (implemented as physical layer module **2608**/control module **2610).** Each of traffic monitoring module **5802,** HW/SW power management module **5804,** activity control module **5806,** and scheduler module **5808** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. While the individual components of communication module **2606** are depicted separately in FIG. **58,** this depiction serves to highlight the operation of communication module **2606** on a functional level. Consequently, in some aspects one or more of the components of communication module **2606** may be integrated into a common hardware and/or software element. Additionally, the functionality described herein (in particular e.g., the formulas/equations, flow charts, and prose descriptions) may be readily incorporated using ordinary skill in the art into program code for retrieval from a non-transitory computer readable medium and execution by a processor. For example, in some aspects each of traffic monitoring module **5802,** HW/SW power management module **5804,** activity control module **5806,** and scheduler module **5808** may be executed as separate software modules on a processor. Furthermore, in some aspects one or more of traffic monitoring module **5802,** HW/SW power management module **5804,** activity control module **5806,** and scheduler module **5808** may additionally be executed as software modules by control module **2610,** in particular scheduler module **5808** which may be e.g., a MAC scheduler of control module **2610.**

Physical layer module **2608** and control module **2610** may serve as the processing infrastructure of network access node **2002** while traffic monitoring module **5802,** HW/SW power management module **5804,** activity control module **5806,** and scheduler module **5808** may oversee application of duty cycling to the processing schedule of physical layer module **2608** and control module **2610.** Communication module **2606** may provide output to the air interface (via antenna system **2602** and radio module **2604)** in the downlink direction and to the core interface (via a backhaul interface) in the uplink direction. Communication module **2606** may receive input in via the air interface in the uplink direction and may receive input via the core interface in the downlink direction.

Traffic monitoring module **5802** may be responsible for monitoring current traffic loads (for uplink and downlink) and providing traffic load information to activity control module **5806.** Activity control module **5806** may then select an appropriate duty cycle based on the traffic load information, where high traffic loads may demand long active phases and low traffic loads may allow for long inactive phases. Activity control module **5806** may provide the selected duty cycle to scheduler module **5808** and HW/SW power management module **5804.** Scheduler module **5808** may then implement the selected duty cycle by determining a network resource allocation (e.g., in the form of data grid **5720)** based on the active and inactive phases of the selected duty cycle that concentrates data traffic into the active phase. HW/SW power management module **5804** may implement the selected duty cycle by controlling processing infrastructure **2608/2610** (physical layer module **2608** and control module **2610)** to power up and down or transition between high performance/high power consumption and low performance/low power consumption states according to the active and inactive phases selected duty cycle. Processing infrastructure **2608/2610** may process data according to the control provided by scheduler module **5808** and HW/SW power management module **5804.**

Accordingly, in the downlink direction traffic monitoring module **5802** may monitor incoming downlink traffic arriving over core interface **5810** (which may be e.g., an S1 interface with an MME and/or an S-GW of an LTE EPC). Traffic monitoring module **5802** may monitor such incoming downlink traffic to determine traffic load information that quantifies the current level of downlink traffic, e.g., by throughput or another similar measure. For example, traffic monitoring module **5802** may calculate an average throughput such as with a sliding window technique or other similar averaging algorithm. As downlink traffic throughput may change relatively slowly over time, such a metric that evaluates average throughput over a past observation period may be predictive of future traffic patterns. Traffic monitoring module **5802** may then provide the downlink traffic throughput to activity control module **5806** as the traffic load information.

Activity control module **5806** may be configured to receive the traffic load information and select an appropriate duty cycle based on the traffic load information. For example, in some aspects activity control module **5806** may utilize a predefined mapping scheme that accepts a downlink traffic throughput as input and provides a duty cycle as output where the duty cycle defines the active phase during active and inactive phase duration. As previously indicated, heavy traffic conditions may call for longer active phases while light traffic conditions may allow for longer inactive phases. The predefined mapping scheme may be configurable by a designer and may need to provide a suitable amount of radio resources in the active phase to support the downlink traffic throughput, e.g., may need to provide a sufficient number of RBs to contain all scheduled downlink traffic. For example, in the case of an LTE-FDD cell with 20MHz bandwidth, 64QAM modulation and 2x2 MIMO capabilities (LTE category 4), processing infrastructure **2608/2610** may continuously operate in active phase at full processing efficiency (100% duty cycle, no inactive phases) at maximum downlink traffic, e.g., 150Mbps for the LTE category 4 capabilities assumed in this example. When the current downlink traffic demand reduces to e.g., 75Mbps, processing infrastructure **2608/2610** may be operated at a ratio of active to inactive phases equal to one, e.g., active and inactive phases have equal length (50% duty cycle). Exemplary duty cycles may be in the range of e.g., 5 ms, 10 ms, 20 ms, 50 ms, 100 ms, etc., where each duty cycle may be split between active and inactive phases according to a specific ratio. The overall duty cycle length as well as the active/inactive phase ratio may depend on the amount of traffic throughput as well as the latency requirements of the traffic. As processing infrastructure **2608/2610** may process and package the incoming downlink traffic to produce a physical layer data stream, the predefined mapping scheme may also approximate how much physical layer data will be produced from the incoming downlink traffic to ensure that the active phase has sufficient resources to transport the physical layer data stream.

After selecting a duty cycle based on the traffic load information, activity control module **5806** may provide the selected duty cycle to scheduler module **5808** and HW/SW power management module **5804.** Scheduler module **5808** may then shape the downlink traffic according to the duty cycle, which in some aspects may include scheduling all downlink grants within the active phase. Scheduler module **5808** may determine the relative position of the downlink grants according to conventional network scheduling algorithms, e.g., MAC scheduler algorithms, which may include, for example, round robin scheduling. Scheduler module **5808** may therefore generally produce a downlink grant schedule as shown in data grid **5720** where all downlink grants are scheduled during the active phase. Scheduler module **5808** may also provide the downlink grants (in addition to related control information) to served terminal devices in order to enforce the determined schedule. While scheduler module **5808** may additionally provide control information to served terminal devices that specifies the active and inactive phases of the selected duty cycle, in some aspects scheduler module **5808** may instead enforce the active and inactive phases via downlink (and as later detailed uplink) grants without explicitly notifying served terminal devices of the selected duty cycle.

HW/SW power management module **5804** may then be configured to control processing infrastructure **2608/2610** based on the selected duty cycle. Processing infrastructure **2608/2610** may then perform downlink processing on the incoming downlink traffic provided by core interface **5810** according to the active and inactive phases as directed by HW/SW power management module **5804.** Processing infrastructure **2608/2610** may provide the resulting downlink data to air interface **2602/2604** for downlink transmission.

Activity control module **5806** may control the duty cycle in a dynamic manner based on the varying levels of traffic detected by traffic monitoring module **5802.** For example, if traffic monitoring module **5802** provides traffic load information to activity control module **5806** that indicates less downlink traffic, activity control module **5806** may adjust the duty cycle to have longer inactive phases to increase power savings (and vice versa in the case of more downlink traffic). Accordingly, traffic monitoring module **5802** may continuously or periodically provide traffic load information to activity control module **5806,** in response to which activity control module **5806** may continuously or periodically select a duty cycle to provide to HW/SW power management module **5804** and scheduler module **5808** for implementation.

The power management architecture of processing infrastructure **2608/2610** may determine the degree of control that HW/SW power management module **5804** has over processing infrastructure **2608/2610.** For example, in a simple case HW/SW power management module **5804** may only be able to turn processing infrastructure **2608/2610** on and off. Accordingly, HW/SW power management module **5804** may turn processing infrastructure **2608/2610** on during active phases and off during inactive phases in accordance with the duty cycle.

According to a further aspect, processing infrastructure **2608/2610** may be configured with advanced power management architecture, such as where processing infrastructure **2608/2610** has a predefined set of ‘power states’ where each power state has a predefined level of power consumption and processing capability (e.g., the ability to support a given processing demand). Accordingly, in addition to a completely ’off’ state, the predefined power states may include a lowest power state with the lowest power consumption and lowest processing capability and further power states of increasing power consumption and processing capability up to the highest power state. Such power states may provide varying power consumption and processing capability for software components through different CPU clock frequencies, different voltages, and different use of cores in a multi-core system. As power consumption is proportional to voltage-squared times frequency ($V^2f$), low power states may have lower CPU frequency and/or voltage than higher power states. In a multi-core system, the use of more cores may have increased power consumption than the use of less cores, where the power consumption at each core may additionally be controlled by CPU frequency and voltage. In terms of hardware components, such power states may utilize dynamic frequency and voltage scaling (DVFS), different clock gating, and different power gating to provide varying power consumption and processing capability across the power states. For multi-core uses, such as for CRAN or virtual-RAN (VRAN) architectures, processing infrastructure **2608/2610** can be implemented on a multi-core server CPU and may utilize power states according to e.g., an Intel x86 architecture. Such power management techniques may involve complex distributions of computing load across each of the cores. Regardless of specifics, each power state may delimit a predefined configuration of such features (e.g., a predefined setting of one or more of CPU clock frequency, voltage, number of cores, combined interaction between multiple cores, DVFS, clock gating, and power gating) for the software and/or hardware components of processing infrastructure **2608/2610.**

Accordingly, some aspects where HW/SW power management module **5804** may utilize the predefined power states of processing infrastructure **2608/2610** to control processing infrastructure **2608/2610** according to the active and inactive phase of the duty cycle. Alternative to a predefined power state scheme, HW/SW power management module **6204** may be configured to control processing infrastructure **2608/2610** to operate according to configurable power states, where HW/SW power management module **6204** may be able to individually adjust (e.g., in a continuous or discretized fashion) one or more of CPU clock frequency, voltage, number of cores, combined interaction between multiple cores, DVFS, clock gating, and power gating to adjust the processing efficiency and power consumption of processing infrastructure **2608/2610.**

In some aspects, HW/SW power management module **5804** may be configured to power down processing infrastructure **2608/2610** during inactive phases. As previously described regarding data grid **5740,** such may result in power savings in particular due to the avoidance of load-independent power consumption during the inactive phases. However, the complete shutdown of processing infrastructure **2608/2610** during the inactive phases may be detrimental to latency-critical traffic as the delays between active phases may introduce extra latency into downlink traffic. This added latency may have negative impacts on latency-critical traffic such as voice traffic. Accordingly, in some aspects HW/SW power management module **5804** may split processing infrastructure **2608/2610** into an 'always-on' part and a 'duty-cycling' part, where the always-on resources may constantly provide limited processing capabilities at low power and the duty cycling resources may turn on and off according to the active and inactive phases. The processing resources employed for the always-on part may have very low leakage power and, although some power consumption will occur, may not have high load-independent power consumption as in the case of data grid **5730.**

Accordingly, in some aspects higher protocol stack layers (e.g., transport layers) may indicate the traffic types to activity control module **5806,** which may enable activity control module **5806** to identify latency-critical traffic (e.g., voice traffic) and non-latency-critical traffic (e.g., best-effort traffic) and subsequently route latency-critical traffic to the always-on resources and non-latency critical traffic to the duty-cycling resources. In some aspects scheduler module **5808** can also be configured to perform the scheduling functions for scheduling downlink grants for the latency-critical data during the inactive phase. Processing infrastructure **2608/2610** may then process the latency-critical traffic with the always-on resources during inactive phases and with either the always-on resources or duty-cycling resources during active phases, thus offering the same or similar latency as in a conventional non-duty-cycled case. Processing infrastructure **2608/2610** may then process the non-latency-critical traffic with the duty-cycling resources during the next active phase, which may introduce latency to the non-latency-critical traffic during the intervening time period.

FIG. **59** shows an exemplary depiction of the use of always-on resources at processing infrastructure **2608/2610,** where terminal devices UE1 and UE2 may be receiving non-latency critical traffic and terminal device UE3 may be receiving latency-critical traffic. As shown in data grid **5910,** scheduler module **5808** may schedule the traffic for all of UE1, UE2, and UE3 during the active phase while only scheduling the traffic for UE3 during the inactive phase. Accordingly, processing infrastructure **2608/2610** may be configured to process the latency-critical traffic for UE3 with the always-on resources during the inactive phase, thus avoiding the introduction of extra latency to the latency-critical traffic.

As shown in data grid **5920,** the active phase may have similar power-consumption to the case of data grid **5740** while the inactive phase may have slightly higher power consumption due to the operation of the always-on resources of processing infrastructure **2608/2610.** However, the power savings indicated at **5922** may still be considerable (e.g., less than the load independent power consumption of data grid **5730)** while avoiding excessive latency in latency-critical traffic.

There may be various options available for the always-on resources of processing infrastructure **2608/2610.** For example, in some aspects of a multi-core implementation, HW/SW power management module **5804** may control processing infrastructure **2608/2610** to utilize e.g., a single core for the always-on resources and the remaining cores for the duty-cycling resources. Additionally or alternatively, in some aspects a low predefined power state may be utilized for the always-on resources. Various implementations using more complex embedded system power management functions can also be applied to provide resources of processing infrastructure **2608/2610** for the always-on portion.

In some aspects, HW/SW power management module **5804** may also consider the amount of latency-critical traffic when selecting always-on resources from processing infrastructure **2608/2610.** For example, in the case of data grid **5910** there may only be a limited amount of latency-critical traffic. Accordingly, HW/SW power management module **5804** may only require a limited portion of the total processing resources available at processing infrastructure **2608/2610** for the always-on resources. If there is a large amount of latency-critical traffic, HW/SW power management module **5804** may require a greater amount of the total processing resources of processing infrastructure **2608/2610** for the always-on resources. In certain cases, the always-on resources of processing infrastructure **2608/2610** may have greater processing capability than the duty-cycling resources, such as in order to support a large amount of latency-critical traffic. Although such may result in greater power consumption, the use of duty-cycling resources at processing infrastructure **2608/2610** may still provide power savings.

In some aspects, processing infrastructure **2608/2610** may use a variety of different modifications depending on further available features. For example, in a setting where network access node **2002** is utilizing carrier aggregation, processing infrastructure **2608/2610** may realize the primary component carrier with the always-on resources while subjecting secondary component carriers to duty cycling with the duty-cycling resources. In another example, dual-connectivity setting processing infrastructure **2608/2610** may provide the master cell group with the always-on resources and the secondary cell group with the duty-cycling resources. In another example, in an anchor-booster setting, processing infrastructure **2608/2610** may provide the anchor cell with the always-on resources and the booster cell with the duty-cycling resources.

Traffic monitoring module **5802,** HW/SW power management module **5804,** activity control module **5806,** scheduler module **5808,** and processing infrastructure **2608/2610** may therefore utilize a duty cycle in the downlink direction, thus allowing for power savings at network access nodes. As shown in FIG. **58,** in some aspects traffic monitoring module **5802** may also monitor uplink traffic at air interface **2602/2604** to enable communication module **2606** to similarly implement duty cycling for uplink processing. Communication module **2606** may either implement such uplink duty cycling separately from or in coordination with the downlink duty cycling described above. For example, if processing infrastructure **2608/2610** has a strict allocation between uplink and downlink processing resources, in particular where, for example, power consumption for uplink processing is substantially independent from power consumption from downlink processing, communication module **2606** may be configured to separately select uplink and downlink duty cycles. In other words, activity control module **5806** may be configured to select a downlink duty cycle based on downlink traffic at core interface **5810** and to select an uplink duty cycle based on uplink traffic at air interface **2602/2604** or at a suitable internal interface in communication module **2606.** Alternatively, if processing resources at processing infrastructure **2608/2610** are shared between uplink and downlink processing, activity control module **5806** may in some aspects be configured to coordinate the uplink and downlink duty cycles, such as by aligning the active and inactive phases of the uplink and downlink duty cycles as closely as possible to maximize power savings.

Traffic monitoring module **5802** may be configured to monitor uplink traffic at air interface **2602/2604** and/or an interface of communication module **2606** to provide traffic load information to activity control module **5806** that indicates a current uplink traffic throughput. Likewise to the downlink direction, traffic monitoring module **5802** may monitor uplink traffic to calculate an average uplink throughput, such as with a sliding window technique or other similar averaging algorithm, which may be predictive of future uplink traffic patterns. In addition to measuring average uplink throughput, traffic monitoring module **5802** may monitor uplink traffic such as buffer status reports (BSRs) and scheduling requests (SRs) received at air interface **2602/2604** (and potentially identified at communication module **2606).** As both BSRs and SRs may be indicative of the amount of uplink data at terminal devices that is pending for uplink transmission, traffic monitoring module **5802** may utilize such information in addition to average uplink throughput to generate the traffic load information for activity control module **5806.** Traffic monitoring module **5802** may additionally utilize metrics such as HARQ processing turnaround time, e.g., the amount of time required to process uplink data before providing HARQ feedback, to indicate traffic load.

In some aspects, activity control module **5806** may be configured to select an uplink duty cycle in an equivalent manner as in the downlink case described above, e.g., according to a predefined mapping scheme that receives the uplink traffic load information as input and outputs an uplink duty cycle (where the predefined mapping scheme may be different for uplink and downlink according to the differences in uplink and downlink traffic). As previously indicated, if performing both uplink and downlink duty cycling, activity control module **5806** may be configured to adjust the uplink and/or downlink duty cycle relative to each other in order to align (or partially align) active and inactive phases. The uplink and downlink duty cycles may be the same (e.g., have the same active and inactive phase durations) or different.

Activity control module **5806** may then provide the selected duty cycle to scheduler module **5808** and HW/SW power management module **5804.** Scheduler module **5808** may then shape uplink traffic according to the active and inactive phases of the selected duty cycle, which may include scheduling uplink grants during the active phase. HW/SW power management module **5804** may then control processing infrastructure **2608/2610** to perform processing on uplink data according to the active and inactive phases of the selected duty cycle.

As in the downlink case, in some aspects HW/SW power management module **5804** and processing infrastructure **2608/2610** may additionally utilize always-on resources of processing infrastructure **2608/2610** to support latency-critical uplink traffic such as voice traffic or any other traffic type with strict latency requirements. Accordingly, activity control module **5806** may utilize traffic type information provided by higher protocol stack layers to route latency-critical uplink data to the always-on resources and non-latency-critical data to the duty-cycling resources.

In addition to the use of always-on resources for latency-critical uplink traffic, in some aspects communication module **2606** may have additional applications of always-on resources of processing infrastructure **2608/2610** in the uplink direction. As opposed to the downlink direction in which scheduler module **5808** may have complete control over scheduling decisions, terminal devices may have some flexibility in the timing of uplink transmissions. Accordingly, in certain scenarios terminal devices may decide to transmit uplink data such as a scheduling request during the inactive phase of processing infrastructure **2608/2610.** Accordingly, if processing infrastructure **2608/2610** is completely off during the inactive phase, communication module **2606** may not be able to receive the scheduling request and the terminal device will thus need to re-transmit the scheduling request at a later time.

This scenario may occur for terminal devices that are in a connected DRX (C-DRX) state, e.g., for LTE. As opposed to normal connected mode terminal devices that need to monitor the control channel (e.g., for downlink grants) during each TTI, terminal devices in a C-DRX state may only need to monitor the control channel during certain TTIs. Terminal devices in a C-DRX state may therefore be able to conserve power by entering a sleep state for all TTIs that the terminal device does not need to monitor. The C-DRX cycle may have a fixed period and may be composed of a DRX active state where the terminal device needs to monitor control channel and a DRX sleep state where the terminal device does not need to monitor the control channel.

Communication module **2606** (e.g., at scheduler module **5808** or another protocol stack layer entity of control module **2610)** may be configured to specify the DRX configuration to terminal devices and accordingly may dictate when the DRX active and sleep states occur. As terminal devices may generally be monitoring the control channel for downlink grants (which indicate pending downlink data), scheduler module **5808** may configure terminal devices with C-DRX cycles that fit the DRX active state within the active phase of the downlink duty cycle and the DRX sleep state within the inactive phase of the downlink duty cycle.

While such scheduling may be sufficient to fit downlink traffic for C-DRX terminal devices into the active downlink phases, C-DRX terminal devices may not be bound to the DRX cycle for uplink transmission such as scheduling requests (although other uplink transmissions may require an uplink grant from communication module **2606).** Accordingly, C-DRX terminal devices may in certain cases 'break' the C-DRX sleep cycle to transmit a scheduling request to network access node **2002.** If such occurs during an inactive phase of processing infrastructure **2608/2610,** during which processing infrastructure **2608/2610** is completely off, network access node **2002** may not receive the scheduling request.

Accordingly, in addition to supporting latency-critical uplink and downlink traffic, in some aspects it may be useful for HW/SW power management module **5804** to utilize an always-on power state of processing infrastructure **2608/2610** to support scheduling requests, such as from C-DRX terminals. Such may also be useful to support random access from idle mode terminal devices, in particular if the random access configuration employed by network access node **2002** has random access occasions that occur during inactive uplink phases (although communication module **2606** may alternatively be able to select a random access configuration and uplink duty cycle in which all random access occasions occur during active uplink phases).

As previously indicated, activity control module **5806** and scheduler module **5808** may rely on traffic type information in order to identify latency-critical traffic. Such traffic type information may generally be available at layers above the radio access protocol stack layers of network access node **2002,** such as Transmission Control Protocol (TCP)/Intemet Protocol (IP) at network and transport layers. These higher layer protocols may be physically embodied as software components in network nodes that are located along a backhaul interface and are responsible for exercising data transfer between network access node **2002** and core network, e.g., over an S1 interface. They may in general be embodied as software components in access network nodes, core network nodes and external data network nodes and handle data transfer from source (which may be a data source **1612** in terminal device **1502** or an equivalent function in an application server) to destination (which may be a data sink **1616** in terminal device **1502** or an equivalent function in an application server) through core network, external data network and access network. FIG. 60 shows an exemplary depiction in which network node **6002** is located as part of a backhaul interface, which may carry data between network access node **2002** and the core network. Network node **6002** may be a processor configured to execute software-defined instructions in accordance with network and transport layer protocols, for example, TCP/IP, to facilitate such data transfer, and may be a software connection with transport layers of one or more terminal devices served by network access node **2002.** Network node **6002** may be physically placed at a base station site, e.g., proximate to communication module **2606** e.g., on a rack, at another physical location along a backhaul interface, or may be implemented on one or more servers, e.g., as part of a cloud computing system.

As network node **6002** encompasses the network and transport layer of the data connection feeding into network access node **2002,** network node **6002** may have access to traffic type information that indicates which data is latency-critical. For example, the traffic type information may be IP source and destination addresses, TCP port numbers, or Differentiated Services (DiffServ) information, which network node **6002** may be able to identify and recognize using IP-layer protocols. For example, in the case of DiffServ information, IP packet headers may have a differentiated services field (DS field) containing a Differentiated Services Code Point (DSCP) that indicates the priority of the traffic, which may consequently indicate latency-critical traffic.

Accordingly, in some aspects network node **6002** may be configured to obtain traffic type information that identifies the latency-critical data and may provide this information to activity control module **5806** and scheduler module **5808** to enable activity control module **5806** and scheduler module **5808** to select duty cycles based on the latency-critical traffic (e.g., with an always-on power state sufficient to support the latency-critical traffic) and to schedule the latency-critical traffic appropriately.

In accordance with network and transport layer protocols, network node **6002** may be configured to implement QoS and flow control mechanisms to handle the bidirectional transfer of data traffic over a backhaul interface and in general between source and destination, which may be e.g., different queues for IP packets with different priorities. Although the duty cycling at network access node **2002** may affect the transfer of data in the radio access network, network access node **2002** may simply appear like a base station suffering from regular congestion at the transport layer of the data source and the destination, e.g., the device and the server the device is communicating with; in other words, the duty cycling may be transparent to the flow control mechanisms, for example, TCP slow start and TCP windows. Accordingly, network node **6002** may implement the proper QoS mechanisms in order to control risk of packet losses by queue overflow.

In some aspects, network access node **2002** may take additional measures to help ensure that the capacity under duty cycling meets certain minimum requirements. For example, the activity control module **5806** may derive terminal-specific uplink and downlink grant budgets from higher protocol layer information, e.g., QoS Class Identifier (QCI) during EPS default and dedicated bearer setup procedure. Activity control module **5806** may then consider these uplink and downlink budgets when selecting duty cycles while scheduler module **5808** may not allow uplink and/or downlink grants in an active phase for a particular terminal device that has exceeded its budget.

In some aspects, packet loss due to queue overflow during inactive duty cycle phases may also be addressed with latency tolerance reporting schemes, such as from Peripheral Component Interconnect Express (PCIe) 3.0 devices. Accordingly, a backhaul interface, e.g., an S1 interface, and the terminal devices served by network access node **2002** may report their buffering capabilities in the downlink and uplink directions, respectively, to activity control module **5806.** Activity control module **5806** may then consider such buffering reports when determining the length of inactive phases in selecting a duty cycle. Such may also ensure that a backhaul interface, for example, an S1 interface, is served again by a downlink grant in the next active phase and each reporting terminal device is served again by an uplink grant before the respective queues overflow.

In various aspects, communication module **2606** may additionally employ any of a number of different congestion avoidance schemes established for fully-loaded network components. Furthermore, in some aspects, traffic monitoring module **5802** may rely on cooperation from terminal devices to apply more enhanced prediction of traffic patterns. For example, a terminal device served by network access node **2002** such as terminal device **1502** may preemptively indicate that uplink and/or downlink traffic at terminal device **1502** is expected to increase in the near future, such as when a user of terminal device **1502** unlocks the screen, picks up the phone, opens a certain application, etc. If terminal device **1502** detects any such action, e.g., at an application layer of an application processor of data source **1612**/data sink **1616** or via a motion sensor (e.g., a gyroscope or accelerometer), terminal device **1502** may report to network access node **2002** that a mobile originating operation may be triggered in the near future that will result in increased uplink or downlink traffic. For example, terminal device **1502** may utilize a reporting mechanism, such as a Power Preference Indicator (PPI) bit, to indicate potential imminent triggering of terminal uplink or downlink traffic to network access node **2002.** Traffic monitoring module **5802** (or another component of communication module **2606)** may be configured to detect such indications in uplink traffic received at air interface **2602/2604** and to consider such indications when providing traffic load information to activity control module **5806,** e.g., by increasing traffic estimates provided the traffic load information when such information is received from terminal devices.

Network access node **2002** may therefore utilize the duty cycling scheme to reduce power consumption of the processing infrastructure. As described above, network access node **2002** may be configured to select appropriate duty cycles based on current and past traffic conditions in addition to utilizing enhancements such as always-on resources to support both latency-critical and unpredictable traffic. Aspects of the disclosure may be useful where the processing infrastructure is configured with complex power management features that provide a high degree of control based on predefined power states.

Furthermore, while described above in the setting of a base station, some aspects of the disclosure may be implemented in any network processing component that provides scheduling functionality for at least one of its fronthaul or backhaul interfaces. For example, network node **6002** or any other processing component located e.g., along a backhaul interface may employ the disclosed duty-cycling techniques to implement duty cycling at its processing infrastructure and regulate uplink and/or downlink traffic accordingly. For example, network node **6002** may be configured to provide scheduling functions for traffic on the backhaul interface and, in order to conserve power, may select a duty cycle (e.g., based on the traffic conditions of the backhaul interface) with which to operate one or more processing components of network node **6002** (e.g., processors, hardware accelerators, etc.). Network node **6002** may thus implement any of the techniques described above, including the use of predefined power states of a power management system, always-on resources, etc.

FIG. **61** shows method **6100** of operating a network processor according to an aspect of the disclosure. As shown in FIG. **61,** method **6100** includes monitoring uplink or downlink data traffic associated with a radio access network to determine traffic load conditions **(6110),** selecting a duty cycle with an active phase and an inactive phase based on the traffic load conditions **(6120),** and processing additional uplink or downlink data traffic with the network processing infrastructure in a high power state during the active phase and in a low power state during the inactive phase (**6130**).

2.7 Power-Efficiency #7

In some aspects of this disclosure, a network processing component may conserve power by triggering low power states based on anticipated processing demands. Accordingly, the network processing component may monitor certain performance indicators to estimate upcoming processing demands and may scale processing efficiency and the resulting power consumption based on a history of past processing, current processing, or an estimated upcoming processing demand. By adapting processing efficiency and power consumption based on history of past processing, current processing, or estimated upcoming processing demand, network processing components may provide processing efficiency sufficient for upcoming processing demands without expending unnecessary power. These aspects may be used with common channel aspects, e.g., a network processing component may process a common channel based on history of past processing, current processing, or estimated future processing, or past, present, or estimated future demand.

As described above, network access nodes such as network access node **2002** of FIG. **26** may perform processing on downlink and/or uplink data with hardware and/or software components. The processing demand on a given network access node may be directly correlated with the radio traffic load. For example, a base station serving a large number of terminal devices with active connections may have a high processing demand while a base station serving only a few terminal devices with active connections may have a much lower processing demand.

To assist with optimizing power consumption, a network access node may monitor traffic conditions to anticipate an upcoming processing demand. The network access node may then scale processing efficiency according to specific techniques to optimize processing efficiency based on the anticipated upcoming processing demand. As reduced processing efficiency may result in reduced power consumption, the network access node may avoid excessive power consumption.

As described above, network access node **2002** may employ physical layer module **2608** and control module **2610** as the processing infrastructure to process uplink and downlink data, which may include physical layer processing in the case of physical layer module **2608** and protocol stack layer processing in the case of control module **2610.** Although not limited to such, physical layer module **2608** and control module **2610** may include one or more processors and/or one or more hardware accelerators, where the processors may generally execute control and algorithmic functions (defined as retrievable program code) and assign specific processing-intensive tasks to the hardware accelerators depending on their respective dedicated functionalities. Control module may be responsible for upper layer base station protocol stack functions including S1-MME and S1-U protocol such as Media Access Control (MAC), Radio Link Control (RLC), Packet Data Convergence Protocol (PDCP), RRM, Radio Resource Control (RRC), in an exemplary LTE setting.

Communication module **2606** of network access node **2002** may therefore employ processing infrastructure **2608/2610** to process uplink and downlink data. FIG. **62** depicts an internal configuration of network access node **2002** according to some aspects in which network access node **2002** may control the processing efficiency of processing infrastructure **2608/2610** according to anticipated processing demands to assist with optimizing power consumption. As shown in FIG. **62,** communication module **2606** may include processing infrastructure **2608/2610,** processing monitoring module **6202,** HW/SW power management module **6204,** activity control module **6206,** and scheduler module **6208.** Each of processing monitoring module **6202,** HW/SW power management module **6204,** activity control module **6206,** and scheduler module **6208** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. While the individual components of communication module **2606** are depicted separately in FIG. **62,** this depiction serves to highlight the operation of communication module **2606** on a functional level. Consequently, one or more of the components of communication module **2606** may be integrated into a common hardware and/or software element. Additionally, the functionality described herein (in particular e.g., formulas/equations, flow charts, and prose descriptions) may be readily incorporated by one of ordinary skill in the art into program code for retrieval from a non-transitory computer readable medium and execution by a processor. For example, each of processing monitoring module **6202,** HW/SW power management module **6204,** activity control module **6206,** and scheduler module **6208** may be executed as separate software modules on a processor. Furthermore, one or more of processing monitoring module **6202,** HW/SW power management module **6204,** activity control module **6206,** and scheduler module **6208** may additionally be executed as software modules by control module **2610.** Scheduler module **6208** may be e.g., a MAC scheduler of control module **2610.**

In the uplink direction, processing infrastructure **2608/2610** may process uplink data received from terminal devices over air interface **2602/2604** (implemented as antenna system **2602** and radio module **2604**) to provide to the core network via core interface **5810.** In the downlink direction, processing infrastructure **2608/2610** may process downlink data received from the core network via core interface **5810** to provide to terminal devices via air interface **2602/2604**

With respect to uplink processing at processing infrastructure **2608/2610,** activity control module **6206** may be configured to anticipate future uplink processing demands for processing infrastructure **2608/2610** and provide commands to HW/SW power management module **6204,** which may control the power consumption and processing efficiency of processing infrastructure **2608/2610** based on the commands provided by activity control module **6206.** Activity control module **6206** may be configured to evaluate processing behavior via processing monitoring module **6202** and/or scheduling load via scheduler **6208** to determine an appropriate processing efficiency and power consumption for processing infrastructure **2608/2610.**

Processing monitoring module **6202** may therefore be configured to monitor processing behavior at processing infrastructure **2608/2610** to anticipate future processing demand. As previously indicated, processing infrastructure **2608/2610** may have high processing demand when network access node **2002** is highly loaded, e.g., when network access node **2002** is serving a large number of active terminal devices, and may have lower processing demand when network access node **2002** is lightly loaded, e.g., when network access node **2002** is serving a small number of active terminal devices. Similarly, there may be a high processing demand when terminal devices being served by network access node **2002** have strict latency demands, as processing infrastructure **2608/2610** may need to complete processing in a timely manner. For example, in an LTE setting the eNB scheduler may apply more power (and frequency) to processing infrastructure **2608/2610** to achieve lower latency for specific QCIs.

In the uplink direction, processing infrastructure **2608/2610** may complete uplink processing on uplink data received from terminal devices within a specific timing constraint. In an exemplary LTE setting, an eNodeB may need to receive uplink data over a given TTI (1 ms in duration) and may have, for example, the three following TTIs to complete uplink processing on the received uplink data before providing acknowledgement (ACK)/non-acknowledgement (NACK) feedback (known to as 'HARQ' feedback in LTE). Accordingly, processing infrastructure **2608/2610** may need to receive, decode, demodulate, and error-check uplink data received from various served terminal devices to determine whether the uplink data was received correctly or incorrectly. If processing infrastructure **2608/2610** determines that uplink data was received correctly from a given terminal device, processing infrastructure **2608/2610** may transmit an ACK (in the fourth TTI after the TTI in which the uplink data was received) to the terminal device. Conversely, if processing infrastructure **2608/2610** determines that uplink data was not received correctly from a given terminal device, processing infrastructure **2608/2610** may transmit a NACK (in the fourth TTI after the TTI in which the uplink data was received) to the terminal device. Other uplink processing time constraints may similarly be imposed in other radio access technologies depending on the associated RAT-specific parameters.

Accordingly, in an exemplary LTE setting, processing infrastructure **2608/2610** may have three TTIs (3 ms) to complete uplink HARQ processing (reception, decoding, demodulating, error checking, etc.) on uplink data to transmit ACK/NACK feedback in a timely manner. The total amount of time needed to complete ACK/NACK processing may be referred to as 'HARQ tumaround' in an LTE setting and 'retransmission notification tumaround' in a general setting. There may be a limit to retransmission notification turnaround times, such as a three TTI (3 ms) processing time budget for HARQ turnaround in LTE. The aspects detailed herein are applicable to other radio access technologies, which may also have retransmission notification turnaround times in which a network access node is expected to complete uplink retransmission processing and provide ACK/NACK feedback. FIG. **63** shows two different charts **6310** and **6320** detailing HARQ turnaround for low-loaded cells (**6310**) and for high-loaded cells (**6320**) in accordance with some aspects of an exemplary LTE setting. As shown in chart **6310** illustrating the cumulative distribution function (CCDF) of HARQ processing completion time, processing infrastructure **2608/2610** may be able to complete uplink HARQ processing with a HARQ turnaround of about 600 us (where each line in chart **6310** is the processing for a single cell out of three cells), which may be well within the 3 ms processing time budget. As shown in chart **6320,** processing infrastructure **2608/2610** may need about 1800 us to complete uplink HARQ processing for high-loaded cells and/or cells with strict latency demands.

As previously described, processing infrastructure **2608/2610** may be able to operate at different processing efficiencies, where higher processing efficiencies may generally result in higher power consumption. For example, processing infrastructure **2608/2610** may operate software components with a higher CPU clock frequency, a higher voltage, and/or a higher number of cores (in a multi-core design) in order to increase processing efficiency while also increasing power consumption (where power consumption at a single core is generally proportional to voltage-squared times frequency ($V^2f$)). Processing infrastructure **2608/2610** may additionally or alternatively operate hardware components with lower DVFS, lower clock gating, and/or lower power gating in order to increase processing efficiency while increasing power consumption.

The various processing efficiencies of processing infrastructure **2608/2610** may be organized into a set of predefined power states, where each power state may be defined as a predefined configuration of one or more of CPU clock frequency, voltage, number of cores, combined interaction between multiple cores, DVFS, clock gating, and power gating for the software and/or hardware components of processing infrastructure **2608/2610.** The various processing efficiencies may further use dynamic frequency and voltage scaling. In some aspects, the predefined power states can be lower frequency states (in some cases known as "P states") and/or lower power states (in some cases known as "C states"). Another non-limiting example can be a "Turbo Boost" state, which may be a power feature that can increase frequency and deliver lower latency for key workloads. Each of the predefined power states may therefore provide a certain processing efficiency with a certain power consumption, where HW/SW power management module **6204** may be configured to control processing infrastructure **2608/2610** to operate according to each of the predefined power states. Alternative to a predefined power state scheme, HW/SW power management module **6204** may be configured to control processing infrastructure **2608/2610** to operate according to configurable power states, where HW/SW power management module **6204** may be able to individually adjust (e.g., in a continuous or discretized fashion) one or more of CPU clock frequency, voltage, number of cores, combined interaction between multiple cores, DVFS, clock gating, and power gating to adjust the processing efficiency and power consumption of processing infrastructure **2608/2610.**

To assist with optimizing power consumption, activity control module **6206** may evaluate past retransmission notification turnaround (e.g., HARQ turnaround) times provided by processing monitoring module **6202** to select a target processing efficiency at which to operate processing infrastructure **2608/2610.** Accordingly, processing monitoring module **6202** may monitor processing behavior at processing infrastructure **2608/2610** over time to characterize the retransmission notification turnaround time based on the current processing efficiency. For example, processing monitoring module **6202** may measure an average retransmission notification turnaround time (e.g., with windowing over a predefined number of most recent TTIs) when processing infrastructure **2608/2610** is set to a first power state. Processing monitoring module **6202** may then provide the average retransmission notification turnaround time to activity control module **6206,** which may compare the average retransmission notification turnaround time to the processing time budget, e.g., 3 ms in the exemplary setting of HARQ. Depending on how much budget headroom the average retransmission notification turnaround time provides (where budget headroom is the difference between the processing time budget and the average retransmission notification turnaround time), activity control module **6206** may instruct HW/SW power management module **6204** to increase or decrease the power state, thus increasing or reducing processing efficiency while still meeting the needs of the network and/or HARQ turnaround. For example, if there is a large budget headroom (e.g., the average retransmission notification turnaround time is far below the processing time budget) when processing infrastructure **2608/2610** is operating at the first power state, activity control module **6206** may instruct HW/SW power management module **6204** to utilize a power state with lower power consumption and lower processing efficiency than the first power state. Conversely, if there is a small budget headroom (e.g., if the average retransmission notification turnaround time is just below the processing time budget), activity control module **6206** may instruct HW/SW power management module **6204** to either utilize a power state with higher power consumption and higher processing efficiency than the first power state or to continue using the first power state. Activity control module **6206** may therefore be preconfigured with decision logic (e.g., in the form of a fixed or adaptive lookup table or similar decision logic) that receives budget headroom or retransmission notification turnaround time as input and provides a change in processing efficiency or power consumption as output. For example, if the retransmission notification turnaround time is e.g., 600 us (e.g., budget headroom is 2.4 ms), activity control module **6206** may decide to reduce processing efficiency or power consumption of processing infrastructure **2608/2610** by e.g., 25% according to the decision logic. Alternatively, if the retransmission notification turnaround time is e.g., 1800 us (e.g., budget headroom is 1.2 ms), activity control module **6206** may decide to reduce processing efficiency or power consumption of processing infrastructure **2608/2610** by e.g., 10% according to the decision logic. In another example, if the retransmission notification turnaround time is 2.9 ms (e.g., budget headroom is . 1 ms), activity control module **6206** may determine that the budget headroom is insufficient (and thus susceptible to potential retransmission notification failures if processing demand increases) and decide to increase processing efficiency or power consumption of processing infrastructure **2608/2610** by e.g., 25% according to the decision logic. Such values are nonlimiting and exemplary and the decision logic employed by activity control module **6206** to make decisions regarding power state changes based on retransmission notification turnaround time may be broadly configurable and may depend on the various power states and configuration of processing architecture **2608/2610.** Activity control module **6206** may generally select to reduce power consumption to the lowest acceptable rate for which processing efficiency is still sufficient to meet the retransmission notification processing time budget (e.g., including some processing efficiency tolerance in case of variations).

Activity control module **6206** may therefore provide HW/SW power management module **6204** with a command to increase or decrease power consumption or processing efficiency of processing infrastructure **2608/2610.** In some aspects, activity control module **6206** may provide the command to adjust power consumption or processing efficiency in the form of a specific adjustment instruction, e.g., to increase processing efficiency at processing infrastructure **2608/2610** by a certain amount, or in the form of a selected power state, e.g., by determining an appropriate power state based on the retransmission notification turnaround time and specifying the selected power state of infrastructure **2608/2610** directly to HW/SW power management module **6204.** Regardless, activity control module **6206** may provide HW/SW power management module **6204** with a command regarding the appropriate power state of processing infrastructure **2608/2610.**

HW/SW power management module **6204** may then control processing infrastructure **2608/2610** to operate according to the selected power state, where the selected power state may be the same or different from the previous power state of processing infrastructure **2608/2610.** Processing infrastructure **2608/2610** may then process uplink data received via air interface **2602/2604** according to the selected power state.

In some aspects, processing monitoring module **6202** may continuously measure retransmission notification turnaround at processing infrastructure **2608/2610** to provide average retransmission notification turnaround measurements to activity control module **6206.** Activity control module **6206** may therefore control operation of processing infrastructure **2608/2610** in a continuous and dynamic fashion over time based on the average retransmission notification turnaround times provided by processing monitoring module **6202.** As retransmission notification turnaround time may generally vary slowly over time (as substantial increases in cell load may be relatively gradual), the average retransmission notification turnaround measured by processing monitoring module **6202** may be generally predictive and thus be effective in characterizing future processing demands on processing infrastructure **2608/2610.**

Accordingly, activity control module **6206** may continuously adjust the processing efficiency and power consumption of processing infrastructure **2608/2610** (via specific adjustment or power state commands to HW/SW power management module **6204**) based on average retransmission notification turnaround to assist with optimizing power consumption and processing efficiency. In particular, activity control module **6206** may control processing infrastructure **2608/2610** to utilize a power state that minimizes power consumption while maintaining processing efficiency at a sufficient level to meet the processing demands indicated by the average retransmission notification turnaround. For example, activity control module **6206** may control processing infrastructure **2608/2610** to use the power state that provides the lowest processing consumption while still meeting processing demands, e.g., that provides retransmission notification turnaround time within a predefined tolerance value (e.g., .1 ms, .05 ms, etc.) of the retransmission notification processing time budget (e.g., 3 ms for HARQ). The predefined tolerance value may thus allow processing infrastructure **2608/2610** to achieve retransmission notification turnaround close to the retransmission notification processing time budget without exceeding it, e.g., due to unpredictable spikes in processing demand.

In some aspects, utilizing a power state that brings retransmission notification turnaround time close to the retransmission notification processing time budget may be useful for cases where processing infrastructure **2608/2610** is sensitive to dynamic power, for example, where processing infrastructure **2608/2610** consumes a large amount of power when operating at a high processing efficiency. In an alternative case, processing infrastructure **2608/2610** may be leakage power-sensitive, e.g., may expend a large amount of power simply from being on. Accordingly, it may be useful for activity control module **6206** to select higher power states that enable processing infrastructure **2608/2610** to finish retransmission notification processing at an earlier time (e.g., with large budget headroom) and power down for the remaining retransmission notification processing time budget. Such may allow processing infrastructure **2608/2610** to avoid expending leakage power as processing infrastructure **2608/2610** will be off.

Additionally or alternatively to the use of processing behavior (as measured by processing monitoring module **6202** as e.g., retransmission notification turnaround time), in some aspects activity control module **6206** may utilize anticipated processing demands as indicated by scheduling information to select power states for processing infrastructure **2608/2610.** As shown in FIG. **62,** activity control module **6206** may also receive scheduling information from scheduler module **6208,** which may be e.g., a MAC scheduler of control module **2610** configured to perform scheduling functions for terminal devices served by network access node **2002.** Scheduler module **6208** may be configured to provide scheduling information including one or more of number of allocated resource blocks, modulation and coding scheme, QoS requirements (e.g., QoS Class Identifier (QCI)), random access channel information (e.g., PRACH), etc., to activity control module **6206.** Such scheduling information may be for uplink schedules determined by scheduler module **6208.**

The scheduling information may provide a basis to anticipate future processing demand on processing infrastructure **2608/2610.** For example, a large number of allocated resource blocks (e.g., a high number of resource blocks allocated to served terminal devices for uplink transmissions) may result in a high processing demand on processing infrastructure **2608/2610,** as processing infrastructure **2608/2610** may need to process a larger amount of data (e.g., to complete uplink retransmission notification processing). Higher modulation and coding schemes, e.g., with more complex modulation schemes and/or lower coding rates, may also result in a high processing demand as processing infrastructure **2608/2610** may need to demodulate data with a more complex scheme and/or decode more encoded data according to a lower coding rate. Higher priority QoS requirements may also result in higher processing demand, which may require higher processing efficiency in order to meet the low latency and low jitter requirements of high QoS requirements (e.g., higher processing frequency thus yielding a minimized processing time and expedited delivery to a terminal device). The presence of random access channel occasions (which in an exemplary LTE setting may be deterministic in each TTI according to the current PRACH configuration that specifies the occurrence of PRACH occasions) may also result in higher processing demand as processing infrastructure **2608/2610** may need to receive and process random access channel data to identify terminal devices engaging in random access procedures.

In some aspects, scheduler module **6208** may have such scheduling information available for both the next TTI in addition to several TTIs in the future, e.g., up to three TTIs (which may depend on the specifics of the scheduling functionality provided by scheduler module **6208**). Such future scheduling information may either be complete scheduling information, e.g., where scheduler module **6208** has determined a full resource grid of uplink scheduling for served terminal devices for one or more upcoming TTIs, or partial, e.g., where scheduler module **6208** has some information (such as the number of terminal devices that will be allocated resources) for one or more upcoming TTIs. Regardless of the specificity, such future scheduling information may be useful in characterizing upcoming processing demand on processing infrastructure **2608/2610.**

Accordingly, in some aspects scheduler module **6208** may be able to evaluate both past and future scheduling information to characterize upcoming demands. As uplink scheduling may generally vary gradually, past scheduling information may be useful to anticipate upcoming processing demands. Additionally, any future scheduling information available at scheduler module **6208** (e.g., for three TTIs in advance; either complete or partial future scheduling information) may provide a direct characterization of processing demand in the immediately upcoming time frame. In some aspects, scheduler module **6208** may be configured to provide activity control module **6206** with ’raw’ scheduling information, e.g., directly with scheduling information, or with ’refined’ scheduling information, e.g., an indicator or characterization of upcoming traffic load. In the raw scheduling information case, scheduler module **6208** may provide activity control module **6206** with a number of allocated resource blocks, modulation and coding scheme, QoS requirements, random access channel information, etc., which activity control module **6206** may evaluate in order to characterize, or ’anticipate’, upcoming traffic load. In the refined scheduling information case, scheduler module **6208** may evaluate a number of allocated resource blocks, modulation and coding scheme, QoS requirements, random access channel information, etc., in order to anticipate the upcoming processing demand and provide an indication to activity control module **6206** that specifies the anticipated upcoming processing demand.

The evaluation performed by activity control module **6206** or scheduler **6208** may thus anticipate upcoming traffic load based on one or more of number of allocated resource blocks, modulation and coding scheme, QoS requirements, random access channel information, etc., where the number of allocated resource blocks, modulation and coding scheme, QoS requirements, and random access channel information may impact processing demand as described above. Activity control module **6206** may therefore determine an anticipated processing demand on processing infrastructure **2608/2610** based on the scheduling information. Similar to as described above regarding the processing behavior evaluation based on retransmission notification turnaround time, in some aspects activity control module **6206** may then determine if a processing efficiency or power consumption adjustment is needed at processing infrastructure **2608/2610.** For example, if activity control module **6206** determines from the scheduling information that processing demand at processing infrastructure **2608/2610** is anticipated to increase, activity control module **6206** may determine that processing efficiency at processing infrastructure **2608/2610** should be increased such as via a switch to a power state with higher processing efficiency. Alternatively, if activity control module **6206** determines from the scheduling information that processing demand at processing infrastructure **2608/2610** is anticipated to decrease, activity control module **6206** may determine that power consumption at processing infrastructure **2608/2610** should be decreased such as via a switch to a power state with less power consumption. As in the case described above regarding retransmission notification turnaround time, activity control module **6206** may determine processing efficiency and power consumption adjustments based on decision logic (e.g., in the form of a fixed or adaptive lookup table or similar decision logic) that receives scheduling information as input and provides a change in processing efficiency or power consumption as output.

Activity control module **6206** may generally decide to adjust processing efficiency and power consumption at processing infrastructure **2608/2610** to utilize a power state that provides processing efficiency sufficient to support the anticipated processing demand with the least power consumption (e.g., including some processing efficiency tolerance in case the anticipated processing demand is an underestimate). Activity control module **6206** may then provide HW/SW power management module **6204** with a command to adjust processing infrastructure **2608/2610** according to the processing efficiency and power consumption adjustment determined by activity control module **6206.** Activity control module **6206** may either provide the command to adjust power consumption or processing efficiency in the form of a specific adjustment instruction, e.g., to increase processing efficiency at processing infrastructure **2608/2610** by a certain amount, or in the form of a selected power state, such as by determining an appropriate power state based on the anticipated processing demand and specifying the selected power state of infrastructure **2608/2610** directly to HW/SW power management module **6204.** Regardless, activity control module **6206** may provide HW/SW power management module **6204** with a command regarding the appropriate power state of processing infrastructure **2608/2610.**

HW/SW power management module **6204** may then control processing infrastructure **2608/2610** to operate according to the selected power state, where the selected power state may be the same or different from the previous power state of processing infrastructure **2608/2610.** Processing infrastructure **2608/2610** may then process uplink data received via air interface **2602/2604** according to the selected power state.

In some aspects, scheduler module **6208** may continuously provide scheduling information to activity control module **6206.** Accordingly, activity control module **6206** may control operation of processing infrastructure **2608/2610** in a continuous and dynamic fashion over time based on the scheduling information provided by scheduler module **6208.** Activity control module **6206** may thus continuously adjust the processing efficiency and power consumption of processing infrastructure **2608/2610** (via specific adjustment or power state commands to HW/SW power management module **6204**) based on processing demand anticipated by scheduling information in order to optimize power consumption and processing efficiency. In particular, activity control module **6206** may control processing infrastructure **2608/2610** to utilize a power state that minimizes power consumption while maintaining processing efficiency at a sufficient level to meet the processing demands indicated by the scheduling information.

Activity control module **6206** may utilize one or both of retransmission notification turnaround time and scheduling information to determine control over the processing efficiency and power consumption of processing infrastructure **2608/2610.** In some aspects where activity control module **6206** is configured to utilize retransmission notification turnaround time and scheduling information to control processing infrastructure **2608/2610,** activity control module **6206** may be configured with decision logic to select power consumption and processing efficiency adjustments to processing infrastructure **2608/2610** based on both retransmission notification turnaround time and scheduling information, such as a two-dimensional lookup table or similar decision logic that receives retransmission notification turnaround time and scheduling information as input and provides a power consumption and processing efficiency adjustment as output (e.g., in the form of either a specific adjustment or a selected power state). For example, activity control module **6206** may receive both an average retransmission notification turnaround time and scheduling information from processing monitoring module **6202** and scheduler module **6208,** respectively, and control processing infrastructure **2608/2610** to utilize minimal power consumption while meeting the processing demand anticipated by the average retransmission notification turnaround time and the scheduling information. As both average retransmission notification turnaround time and scheduling information (both past and future) may be predictive in characterizing future processing demand, such may provide activity control module **6206** with information to effectively select optimal power states for processing infrastructure **2608/2610.**

In various aspects, HW/SW power management module **6204** may utilize other techniques to minimize power consumption at processing infrastructure **2608/2610.** In the retransmission notification turnaround case described above, processing infrastructure **2608/2610** may complete uplink retransmission notification processing for a given TTI with a certain amount of budget headroom time remaining. After processing infrastructure **2608/2610** completes retransmission notification processing for a given TTI, HW/SW power management module **6204** may then power down the resources of processing infrastructure **2608/2610** dedicated to retransmission notification processing for the TTI (where separate resources may be dedicated to different TTIs to address the overlap between the three TTI retransmission notification processing time budget; e.g., in the case of separate cores or in a more complex resource management architecture). HW/SW power management module **6204** may thus conserve further power as these resources of processing infrastructure **2608/2610** may not be needed for the remaining budget headroom.

In some aspects, communication module **2606** may additionally rely on cooperation from terminal devices to reduce power consumption. For example, communication module **2606** (e.g., control module **2610** and/or scheduler module **6208**) may provide control signaling to terminal devices that the terminal devices will only be allocated a limited amount of uplink resources over a specific or indefinite time period. Such may reduce the traffic load on communication module **2606** and consequently reduce the processing demand on processing infrastructure **2608/2610.**

Accordingly, communication module **2606** may assist with optimizing power consumption and processing efficiency of processing infrastructure **2608/2610** based on processing demand indicators such as retransmission feedback processing times (e.g., HARQ processing times) and/or scheduling information (e.g., at a MAC scheduler). Such may allow communication module **2606** to anticipate future processing demands based on the processing demand indicators and consequently minimize power consumption at processing infrastructure **2608/2610** while ensuring that processing infrastructure **2608/2610** has processing efficiency sufficient to support future processing demands. Without loss of generality, application of such may be applied to uplink processing at BBUs, which may be deployed in any type of base station architecture including distributed and cloud/virtual.

FIG. **64** shows method **6400** of operating a network processing module in accordance with some aspects of the disclosure. As shown in FIG. **64,** method **6400** includes monitoring processing demand indicators for first uplink data of a radio access network (**6410**), the processing demand indicators indicating future processing demand at the network processing circuit infrastructure. A first power state for the network processing infrastructure is selected based on the processing demand indicators and a processing efficiency of the first power state (**6420**). Second uplink data of the radio access network is processed with the network processing infrastructure according to the first power state (**6430**).

2.8 Power-Efficiency #8

In some aspects of this disclosure, a network access node may reduce power consumption by detecting whether terminal devices that have ‘unpredictable’ data traffic are connected to the network access node and, when no terminal devices with unpredictable are detected, activating a discontinuous communication schedule (discontinuous transmission and/or discontinuous reception). The network access node may then communicate with any remaining terminal devices with ’predictable’ traffic with the discontinuous communication schedule. As discontinuous communication schedules may be suitable for predictable terminal devices but may not be able to support the data traffic demands of unpredictable terminal devices, the network access node may conserve power without interrupting data connections of the unpredictable terminal devices. These aspects may be used with common channel aspects, e.g., a common channel may use a ’predictable’ traffic scheme.

Terminal devices such as mobile phones, tablets, laptops, etc. may have data connections that are unpredictably triggered by users while terminal devices such as smart alarms (fire/burglar alarms, doorbells, surveillance cameras, etc.), smart home controllers (thermostats, air conditioners, fans, etc.), smart appliances (refrigerators, freezers, coffee machines), may generally have ’regular’ or ’predictable’ data schedules. Many such predictable terminal devices may utilize Internet of Things (IoT) technology and may rely on periodic network access, such as by transmitting and/or receiving periodic updates or reports (e.g., temperature reports, 'all-okay' reports, periodic surveillance images, etc.). Accordingly, discontinuous communication schedules may be well-suited to support the data traffic for such predictable terminal devices as the data traffic may be regular and/or periodic. Conversely, unpredictable terminal devices may have data traffic triggered at times that are not deterministic and thus may not be able to be serviced by a discontinuous communication schedule. As discontinuous communication schedules may be more power efficient than continuous communication schedules, network access nodes according to an aspect of this disclosure may switch between discontinuous and continuous communication schedules based on whether any unpredictable terminal devices are present in order to meet the traffic demands of terminal devices, reduce power consumption, and, as a result, reduce operating costs.

FIG. **65** shows an exemplary network scenario in accordance with some aspects. As shown in FIG. **65,** network access nodes **6502, 6504,** and **6506** may each be configured to provide radio access connections to terminal devices within their respective coverage areas. In the exemplary setting of FIG. **65,** network access node **6502** may be a small cell such as a microcell or femtocell (e.g., a home eNodeB or similar cell) that provides a cellular radio access technology. Alternatively, network access node **6502** may be an access point that provides a short range radio access technology such as a WLAN AP. Network access node **6502** may provide radio access to terminal devices within coverage area **6508,** which may contain a building, such as a residential house or commercial structure, or another area of predictable size. Network access nodes **6504** and **6506** may be macro cells that provide a cellular radio access technology. Although not explicitly depicted in FIG. **65,** in some aspects network access nodes **6504** and **6506** may have coverage areas larger than coverage area **6508.**

Terminal devices **1502, 6510,** and **6512** may be located within coverage area **6508** and may be connected with network access node **6502** (e.g., may be 'served' by network access node **6502**). Accordingly, network access node **6502** may be aware of the presence of terminal devices **1502, 6510,** and **6512** and may provide radio access to terminal devices **1502, 6510,** and **6512.**

Terminal device **1502** may be a terminal device with 'unpredictable' data traffic such as a smart phone, tablet, laptop, smart TV/media player/streaming device, or any similar terminal device that is user-interactive and may have data connections triggered by a user at unpredictable times. For example, a user of a smart phone may be able to initiate a data connection such as voice/audio streams, video streams, large downloadable files, Internet web browser data, etc., at any point in time, while a serving network access node may not be able to determine in advance when such a connection will be initiated by a user. As a result, network access node **6502** may need to provide a radio access connection to terminal device **1502** that can support unpredictable data traffic.

In contrast, terminal devices **6510** and **6512** may be terminal devices with 'predictable' data traffic, such as terminal devices that operate on Internet of Things (IoT) connections that generally rely on data traffic with predictable or 'fixed' schedules. Examples include alarm systems (fire, burglar, etc.), surveillance systems (doorbells, security cameras, etc.), home control systems (thermostats, air conditioning controllers, lighting/electricity controllers, etc.), appliances (refrigerators/freezers, ovens/stoves, coffee machines, etc.). Although some exceptions may apply (as described below), such predictable terminal devices may generally utilize a data connection with network access node **6502** that involves periodic and/or scheduled communications, such as temperature reports, 'all-okay' reports, periodic surveillance images, etc. As the communications of terminal device **6510** and **6512** may be predictable, network access node **6502** may be able to support such data connections with discontinuous communication schedules. Furthermore, data traffic activity for predictable terminal devices may be scheduled further in advance than data traffic activity for unpredictable terminal devices, which may be triggered by a user at any time.

To assist with reducing power consumption and consequently reduce operating costs, network access node **6502** may utilize discontinuous communication modes such as discontinuous transmission (DTX) and/or discontinuous reception (DRX) depending on which types of terminal devices, e.g., unpredictable and predictable, network access node **6502** is serving. For example, if network access node **6502** is only serving predictable terminal devices at a given time, network access node **6502** may not need to support unpredictable data traffic (as may be needed if unpredictable terminal devices are present) and thus may be able to employ DTX and/or DRX for the predictable terminal devices. For example, network access node **6502** may employ a DTX and/or DRX schedule that has relatively sparse transmission and/or reception periods and may be able to schedule all data traffic for the predictable terminal devices within these 'active' periods. Network access node **6502** may then be able to power down communication components for the remaining 'inactive' periods, thus reducing power consumption.

Conversely, if network access node **6502** is serving any unpredictable terminal devices, network access node **6502** may not be able to utilize DTX or DRX due to the likelihood that an unpredictable terminal device will require a data activity during an inactive period of the discontinuous communication schedule. Network access node **6502** may therefore instead use a 'continuous' communication schedule in order to support the potentially unpredictable data traffic requirements of unpredictable terminal devices. Network access node **6502** may therefore continually monitor the served terminal devices to identify whether network access node **6502** is serving any unpredictable terminal devices and, if not, switch to DTX and/or DRX. Such may allow network access node **6502** to meet the data traffic requirements of all served terminal devices while reducing power consumption in scenarios where only predictable terminal devices are being served.

According to an aspect of this disclosure, network access node **6502** may in some aspects be configured in a similar manner to network access node **2002** shown in FIG. **26** and may include antenna system **2602,** radio module **2604,** communication module **2606** (including physical layer module **2608** and control module **1910**). Network access node **6502** may be configured to operate according to any one or more radio access technologies and may provide radio access to terminal devices accordingly.

As introduced above, network access node **6502** may identify scenarios in which network access node **6502** is not serving any unpredictable terminal device (e.g., only serving predictable terminal devices or not serving any terminal devices) and, upon identifying such scenarios, initiate DTX and/or DRX. Without loss of generality, such may be handled at control module **2610.** FIG. **66** shows an exemplary internal configuration of control module **2610,** which may include detection module **6602** and scheduler module **6604** (other components of control module **2610** not directly related to the current aspect are omitted from FIG. **66** for clarity). While detection module **6602** and scheduler module **6604** are depicted separately in FIG. **66,** such serves to highlight the operation of control module **2610** on a functional level. Consequently, in some aspects detection module **6602** and scheduler module **6604** may be integrated into a common hardware and/or software component such as separate software modules stored on a non-transitory computer readable medium that are executed as software-defined instructions by a processor of control module **2610.**

In accordance with some aspects, detection module **6602** may be configured to monitor the set of terminal devices served by network access node **6502** in order to detect scenarios when no unpredictable terminal devices are being served by network access node **6502.** Accordingly, detection module **6602** may evaluate a list of terminal devices currently being served by network access node **6502** to identify whether any served terminal devices are unpredictable terminal devices. Detection module **6602** may obtain the information for the list of served terminal devices by receiving explicit indicators from terminal devices that identify themselves as unpredictable or predictable terminal devices, by monitoring data traffic for served terminal devices to classify each served terminal devices as unpredictable or predictable terminal devices, by receiving information from the core network or another external location that identifies each terminal device as an unpredictable or a predictable terminal device, etc. Regardless, information that details the terminal devices served by network access node **6502** may be available at control module **2610.** The list of served terminal devices may explicitly specify terminal devices as being predictable or unpredictable. For example, the list of terminal devices may specify which terminal devices are IoT (or a similar technology), which may inform detection module **6602** that these terminal devices are predictable terminal devices. In some aspects, detection module **6602** may additionally or alternatively 'classify' the terminal devices as either predictable or unpredictable, for which detection module **6602** may rely on a model (for example, a predefined or adaptive model) that evaluates past data traffic requirements to identify terminal devices as either predictable or unpredictable based on traffic patterns (e.g., which terminal devices have deterministic or regular traffic patterns and which terminal devices have random traffic patterns). Detection module **6602** may in any case be configured to identify predictable and unpredictable terminal devices from the list of terminal devices.

In the exemplary setting of FIG. **65,** terminal device **1502** may be a smart phone, terminal device **6510** may be a home appliance operating an IoT connection, and terminal device **6512** may be a home controller operating an IoT connection. Terminal device **1502** may thus have heavy data traffic requirements and may consequently need to frequently and continually transmit and receive data with network access node **6502** in order to satisfy such heavy data traffic requirements. Conversely, terminal devices **6510** and **6512** may only have light and/or sporadic data traffic requirements and not require substantial transmission and reception with network access node **6502** to support their respective data traffic requirements.

Accordingly, the list of served terminal devices available at detection module **6602** may include terminal devices **1502, 6510,** and **6512** and may specify that terminal device **1502** is an unpredictable terminal device and that terminal devices **6510** and **6512** are predictable terminal devices. Detection module **6602** may therefore determine that network access node **6502** is serving at least one unpredictable terminal device and may report to scheduler module **6604** that unpredictable terminal devices are being served by network access node **6502.**

Scheduler module **6604** may be configured to determine transmission and reception (e.g., downlink and uplink) scheduling for network access node **6502.** Scheduler module **6604** may therefore receive information from detection module **6602** and, based on the information, select a communication schedule for network access node **6502.** Accordingly, if detection module **6602** reports that network access node **6502** is serving at least one unpredictable terminal device, scheduler module **6604** may select a continuous communication schedule (e.g., not DTX or DRX) that can support heavy data traffic for unpredictable terminal devices. Conversely, if detection module **6602** reports that network access node **6502** is not serving any unpredictable terminal devices, scheduler module **6604** may select a discontinuous communication schedule (e.g., DTX and/or DRX) that can support light and/or sparse data traffic for predictable terminal devices while conserving power.

Accordingly, in the setting of FIG. **67** scheduler module **6604** may receive the report from detection module **6602** and determine that network access node **6502** is serving at least one unpredictable terminal device in terminal device **1502.** Scheduler module **6604** may consequently select a continuous communication schedule for network access node **6502.** Network access node **6502** may then transmit and receive data with terminal devices **1502, 6510,** and **6512** according to the continuous communication schedule (e.g., via physical layer module **2608,** radio module **2604,** and antenna system **2602**). Scheduler module **6604** may allocate radio resources to the terminal devices served by network access node **6502** according to the continuous communication schedule and may also provide control signaling to terminal device **1502, 6510,** and **6512** that specifies the radio resource allocation.

FIG. **67** shows an exemplary transmission and reception timing chart for network access node **6502** and terminal devices **1502, 6510,** and **6512** in accordance with some aspects. As shown in FIG. **67,** terminal device **1502** may frequently transmit and receive data with network access node **6502** to support heavy data traffic while terminal devices **6510** and **6512** may only infrequently transmit and receive data with network access node **6502.** As terminal device **1502** requires frequent transmission and reception, scheduler module **6604** may select a continuous communication schedule for network access node **6502** (which may in certain cases (e.g., TDD) have breaks in transmission or reception but may nevertheless not be a DRX or DTX schedule). Network access node **6502** may therefore provide transmission and reception sufficient to support heavy data traffic for terminal device **1502.**

In alternate exemplary scenarios to FIG. **65,** network access node **6502** may not be serving any unpredictable terminal devices (e.g., may be serving exclusively predictable terminal devices or may not be serving any terminal devices). FIG. **68** shows an exemplary scenario according to some aspects in which network access node **6502** may only be serving terminal devices **6510** and **6512** (e.g., as terminal device **1502** has moved outside of coverage area **6508** and/or terminal device **1502** has gone into a radio idle state). Accordingly, when detection module **6602** evaluates the list of served terminal devices (which may be periodically updated and thus reflect that terminal device **1502** is no longer being served by network access node **6502**), detection module **6602** may determine that network access node **6502** is not serving any unpredictable terminal devices. Detection module **6602** may then report to scheduler module **6604** that network access node **6502** is not serving any unpredictable terminal devices.

Accordingly, upon determining that network access node **6502** is not serving any unpredictable terminal devices based on the report from detection module **6602,** scheduler module **6604** may select a discontinuous communication schedule for network access node **6502.** Network access node **6502** may then transmit and receive data with terminal devices **1502, 6510,** and **6512** according to the discontinuous communication schedule (e.g., via physical layer module **2608,** radio module **2604,** and antenna system **2602**). Scheduler module **6604** may allocate radio resources to the terminal devices served by network access node **6502** according to the discontinuous communication schedule and may also provide control signaling to terminal device **1502, 6510,** and **6512** that specifies the radio resource allocation, which may include downlink and uplink grants that respectively fall within the transmit and receive periods of the discontinuous communication schedule. As network access node **6502** is not serving any unpredictable terminal devices and consequently does not need to support heavy data traffic, network access node **6502** may be able to conserve power while still meeting the data traffic needs of predictable terminal devices with the discontinuous communication schedule.

Scheduler module **6604** may be able to select either a DRX/DTX communication schedule or a DTX-only communication schedule for network access node **6502.** FIGs. **69A** and **69B** depict exemplary, non-limiting transmission and reception timing charts for a DRX/DTX communication schedule or a DTX-only communication schedule, respectively, in accordance with some aspects. As shown in FIG. **69A,** scheduler module **6604** may select a DRX/DTX schedule that utilizes both DRX and DTX. In contrast to the continuous communication schedule of FIG. **67,** the DRX/DTX schedule may only have periodic transmit and receive periods instead of continuous transmit and receive periods. Scheduler module **6604** may therefore schedule transmission and reception traffic with terminal devices **6510** and **6512** within the transmit and receive periods of the DRX/DTX schedule, where the periodicity and duration of the transmit and receive periods may be configurable. Control module **2610** may therefore control transmission and reception components of network access node **6502** (e.g., antenna system **2602,** radio module **2604,** physical layer module **2608,** etc.) to power down during inactive periods where no transmission or reception is occurring, thus enabling network access node **6502** to reduce power consumption. As terminal devices **6510** and **6512** may be predictable terminal devices and thus only require sparse and infrequent transmission and reception, network access node **6502** may be able to support terminal devices **6510** and **6512** with the DRX/DTX schedule of FIG. **69A** while reducing power consumption and consequently reducing operating costs of network access node **6502.**

Alternative to the DRX/DTX schedule of FIG. **69A,** in some aspects network access node **6502** may utilize a DTX-only schedule, e.g., a communication schedule with DTX but continuous reception. Such DTX-only schedules may allow network access node **6502** to instantly receive data from certain terminal devices. Accordingly, if terminal device **6512** is, e.g., a burglar or fire alarm, terminal device **6512** may be able to instantly transmit alarm data to network access node **6502** (instead of having to wait until the next receive period of network access node **6502**). Network access node **6502** may then be able to provide such alarm data to the proper destination, e.g., the police or fire authorities, an earlier time than if network access node **6502** was utilizing a DRX schedule. Accordingly, as shown in FIG. **69B,** in some aspects network access node **6502** may only transmit data during transmit periods but may provide constant reception.

Terminal devices **6510** and **6512** may therefore restrict reception to the periodic transmit periods of network access node **6502** but be able to transmit data to network access node **6502** at any point during the continuous reception period of network access node **6502.** As transmission by network access node **6502** may be predictable to the transmit periods, network access node **6502** may conserve power by deactivating transmission components (e.g., antenna system **2602,** radio module **2604,** physical layer module **2608,** etc.) during other time periods. Although the DTX-only schedule may have higher power consumption than the DRX/DTX schedule, network access node **6502** may still consume less power with DTX-only schedules than with continuous communication schedules.

In some aspects, detection module **6602** may recurrently monitor the list of terminal devices served by network access node **6502** to react to changes in the types of terminal devices served by network access node **6502.** Specifically, detection module **6602** may identify when unpredictable terminal devices enter and exit the service of network access node **6502.** For example, if terminal device **1502** moves from its position in FIG. **68** to within coverage area **6508** while scheduler module **6604** is utilizing a discontinuous communication schedule, detection module **6602** may need to identify that an unpredictable terminal device is currently being served by network access node **6502** and report such information to scheduler module **6604.** Scheduler module **6604** may then switch from a discontinuous communication schedule to a continuous communication schedule in response. In an alternative example, terminal device **1502** may be located within coverage area **6508** as shown in FIG. **68** but may initially be in radio idle state. Accordingly, as terminal device **1502** is in a radio idle state, network access node **6502** may not have direct knowledge of terminal device **1502** and detection module **6602** may not consider terminal device **1502** in the list of served terminal devices. However, terminal device **1502** may enter a radio connected state (e.g., by performing random access procedures with network access node **6502** and establishing a radio access connection with network access node **6502**) and thus may begin being served by network access node **6502.** Detection module **6602** may thus detect that an unpredictable terminal device is being served by network access node **6502** and may notify scheduler module **6604.** Scheduler module **6604** may thus switch from a discontinuous communication schedule to a continuous communication schedule to support the heavy data traffic requirements of terminal device **1502.** If terminal device **1502** then moves outside of coverage area **6508** and/or enters a radio idle state, detection module **6602** may notify scheduler module **6604** which may subsequently switch to a discontinuous communication state (assuming no other unpredictable terminal devices have begun being served by network access node **6502**). Detection module **6602** and scheduler module **6604** may thus ‘toggle’ the communication schedule of network access node **6502** between discontinuous and continuous communication schedules based on whether any unpredictable terminal devices are being served by network access node **6502.**

In various aspects, scheduler module **6604** may be also able to configure the DRX/DTX and DTX-only schedules according to different factors. For example, scheduler module **6604** may utilize discontinuous schedules with longer and/or more frequency transmit and/or receive periods when network access node **6502** is serving a large number of predictable terminal devices and/or predictable terminal devices with higher data traffic requirements (e.g., that need to send or receive a large amount for a predictable terminal device, that need to have frequent radio access (e.g., for an alarm system), etc.). Scheduler module **6604** may therefore be configured to select and adjust discontinuous communication schedules based on the changing set of terminal devices served by network access node **6502.**

Accordingly, in various aspects scheduler module **6604** may consider any one or more of the number of terminal devices connected to it, the activity patterns of the terminal devices connected to it, the device types (predictable vs. unpredictable) of the terminal devices connected to it, a time of day (e.g., nighttime when less data traffic is expected vs. daytime when more data traffic is expected), a day of the week (e.g., weekends or holidays when more traffic is expected), a location (e.g., a workplace will have less traffic during the weekend or holiday than a home), etc.

In some aspects, scheduler module **6604** may instruct terminal devices to reselect to a certain RAT and shut off another RAT. For example, if network access node **6502** supports multiple RATs and all of the terminal devices support a particular RAT, scheduler module **6604** may instruct all the terminal devices to switch the supported RAT and subsequently switch off the other RATs to conserve power and reduced interference. Scheduler module **6604** may also schedule its communication schedules with alternating transmission times relative to neighboring network access nodes to reduce interference.

In some aspects, detection module **6602** may treat unpredictable terminal devices as ’temporarily predictable’ terminal devices. For example, terminal device **1502** may be in a radio connected state and positioned in coverage area **6508** as shown in FIG. **65**. However, terminal device **1502** may not currently be in use, e.g., may be motionless, not being handled by a user, have its screen turned off, not receiving input from a user, etc. Accordingly, even though terminal device **1502** is in a radio connected state, terminal device **1502** may not imminently require a radio access connection that supports heavy data traffic. Terminal device **1502** may thus provide network access node **6502** with an indication that terminal device **1502** is temporarily predictable, such as by transmitting a control message to network access node **6502** that specifies that terminal device **1502** is temporarily predictable. Terminal device **1502** may be configured to transmit such control messages based on a timer, such as to transmit a temporarily predictable control message after terminal device **1502** has been unused (e.g., screen off, motionless, no user input, etc.) for a certain amount of time (e.g., 10 seconds, 1 minutes, etc.). Network access node **6502** may receive the temporarily predictable control message, which may indicate to detection module **6602** that terminal device **1502** may be temporarily predictable and thus may be considered as a predictable terminal device. Accordingly, assuming that network access node **6502** is not serving any other unpredictable terminal devices, detection module **6602** may indicate to scheduler module **6604** that network access node **6502** is not currently serving any unpredictable terminal devices. Scheduler module **6604** may therefore switch to a discontinuous communication schedule. Alternatively, terminal device **1502** may be configured to transmit an 'in-use' control messages every time terminal device **1502** is being used (e.g., screen on, motion detected, user input, etc.) and to recurrently transmit 'in-use' control messages during the duration that terminal device **1502** is being used (and not transmit any 'in-use' control messages when terminal device **1502** is not in use). Detection module **6602** may then be configured to determine the time elapsed since the last message and may consider terminal device **1502** as temporarily predictable after a predefined duration of time has elapsed.

In some aspects, there may be other scenarios in which detection module **6602** may consider unpredictable terminal devices as being temporarily predictable. For example, terminal device **1502** may have a user setting in which a user setting may activate a 'temporarily predictable setting' of terminal device **1502.** Terminal device **1502** may report activation and de-activation of the temporarily predictable setting to network access node **6502,** thus enabling detection module **6602** to consider terminal device **1502** as unpredictable or temporarily predictable based on whether the setting is respectively de-activated or activated. Detection module **6602** may additionally utilize 'time of day' to classify unpredictable terminal devices as temporarily predictable. For example, detection module **6602** may consider unpredictable terminal devices as temporarily predictable during nighttime or sleeping hours and as unpredictable during daytime hours. Additionally or alternatively, detection module **6602** may monitor data traffic for unpredictable terminal devices to determine whether discontinuous communication schedules can be used. For example, terminal device **1502** may be in a radio connected state with network access node **6502** but may only have light or sporadic data traffic usage. Detection module **6602** may identify that terminal device **1502** does not require heavy data traffic support (e.g., by evaluating average data traffic of terminal device **1502** over a period of time) and may consider terminal device **1502** as being temporarily predictable. Scheduler module **6604** may then be able to utilize a discontinuous communication schedule. Additionally or alternatively, terminal device **1502** may provide network access node **6502** with control information detailing conditions when terminal device **1502** may be considered temporarily predictable and/or discontinuous scheduling parameters. For example, terminal device **1502** may specify inactivity time periods and/or conditions (e.g., time of day, specific types of inactivity, inactivity duration, etc.) that detection module **6602** may utilize to classify terminal device **1502** as being temporarily predictable. Terminal device **1502** may also specify maximum DRX or DTX length, frequency, and/or duration, which scheduler module **6604** may utilize to select discontinuous communication schedules when terminal device **1502** is temporarily predictable.

Although discussed above in the exemplary setting of a small cell, various aspects of can use any network access node for the implementation. For example, network access node **6504** may be e.g., a macro cell configured with detection module **6602** and scheduler module **6604** as described above. Network access node **6504** may therefore monitor the types of terminal devices served by network access node **6504,** e.g., unpredictable vs. predictable, and switch between continuous and discontinuous communication schedules based on which types of terminal devices are currently being served by network access node **6504.** The above-noted aspect is exemplary rand may be implemented in any type of network access node.

Network access node **6502** may therefore selectively activate discontinuous communication schedules (e.g., DRX/DTX or DTX-only) based on the types of terminal devices currently being served by network access node **6502.** Certain terminal devices may have heavy data traffic requirements and may be considered 'unpredictable' terminal devices while other terminal devices may have sporadic or light data traffic requirements and may be considered 'predictable' terminal devices. Network access node **6502** may therefore determine at a first time that network access node **6502** is not serving any unpredictable terminal devices and may utilize a discontinuous communication schedule. Network access node **6502** may determine at a second time that network access node is serving at least one unpredictable terminal device and may utilize continuous communication schedule. Network access node **6502** may therefore switch between continuous and discontinuous communication schedules based on the types of terminal device served by network access node **6502** and the data traffic requirements of the types.

By selectively utilizing discontinuous communication schedule, network access node **6502** may meet the data traffic requirements of the served terminal devices while being able to conserve power. The use of discontinuous communication schedules may also conserve power at the terminal devices served by network access node **6502** as the served terminal devices may be able to deactivate transmission and reception components during inactive periods in the discontinuous communication schedule. Additionally, interference to other neighboring network access nodes such as network access nodes **6504** and **6506** may be reduced as a result of less frequent transmissions by network access node **6502.**

FIG. **70** shows method **7000** of performing radio communications according to some aspects of the disclosure in a communications system comprising at least one terminal device of a first type and at least one terminal device of a second type different from the first type. As shown in FIG. **70,** method **7000** includes identifying a set of terminal devices currently connected to a network access node (**7010**). A determination is made regarding whether each terminal device of the set of terminal devices is of the first type (**7020**). If each terminal device of the identified set of terminal devices is of the first type, a discontinuous communication schedule is selected to obtain a selected schedule for the network access node for the set of terminal devices (**7030**). If at least one terminal device of the set of terminal devices is of the second type, a continuous communication schedule is selected to obtain the selected schedule for the network access node for the set of terminal devices (**7040**). Data is transmitted or received with the set of terminal devices according to the selected schedule (**7050**).

FIG. **71** shows method **7100** of performing radio communications according to some aspects of the disclosure. As shown in FIG. **71,** method **7100** includes monitoring which terminal devices are connected to a network access node, wherein each of the terminal devices is of a first type or a second type, where the first and second types may be mutually exclusive (**7110**). A discontinuous communication schedule is used for the network access node when each of the terminal devices connected to the network access node are of the first type (**7120**). A continuous communication schedule for the network access node is used when at least one of the terminal devices connected to the network access node is of the second type (**7130**).

2.9 Power-Efficiency #9

According to a further aspect of this disclosure, a network processing component may assume ’keepalive’ responsibilities (e.g., connection continuity services) for a terminal device, thus enabling the terminal device to maintain a data connection without having to repeatedly transmit keepalive messages (e.g., connection continuity messages). The terminal device may therefore be able to enter a low-power state without having to repeatedly wake up and consequently may reduce power consumption. These aspects may be used with common channel aspects, e.g., a common channel where a network processing component assumes ’keepalive’ responsibilities.

FIG. **72** shows an exemplary network scenario including some aspects of terminal device **1502** that may have a radio access connection with network access node **2002.** Network access node **2002** may be e.g., a cellular base station or a short-range network access node such as a Wi-Fi access point. Without loss of generality, in a cellular radio access setting, network access node **2002** may interface with core network **7202,** which may provide an external outlet to cloud service **7204** and other external data networks. Alternatively, in a short-range radio access setting, network access node **2002** may interface with cloud service **7204** and the other external data networks via an internet connection.

As previously described, network access node **2002** may provide a radio access network which terminal device **1502** can utilize to exchange data with network access node **2002,** core network **7202,** cloud service **7204,** and various other external data networks. Terminal device **1502** may thus have a logical software-level connection with each of network access node **2002,** core network **7202** (including various core network nodes), cloud service **7204,** and various other external data networks that utilizes both the radio access network provided by network access node **2002** and other wired and/or wireless connections to support the exchange of data.

Terminal device **1502** may have a connection with cloud service **7204** to exchange data. For example, an application program of terminal device **1502** (e.g., a mobile application program executed at an application processor of data source **1612/data** sink **1616** of terminal device **1502**) may exchange data with cloud service **7204** (e.g., with a counterpart application program executed at cloud service **7204**), which may be a server that provides data to the application program. The application program of terminal device **1502** may thus exchange data with cloud service **7204** as an application-layer software connection that relies on lower layers including the transport layer and radio access layers (cellular protocol stack and physical layer).

The application program of terminal device **1502** and the counterpart application program of cloud service **7204,** which may communicate at the application layer, may rely on lower layers to handle data transfer between the various intermediary nodes (network access node **2002** and the core network nodes of core network **7202**). These lower layers may include the transport layer and radio access layers. Accordingly, the application program and counterpart application program may provide data to the transport layer which may package and provide the data to the lower layers for transport through the network. Without loss of generality, in an exemplary case the application program of terminal device **1502** may rely on a TCP connection at the transport layer to handle data transfer with cloud service **7204.**

Such TCP connections may be end-to-end connections on the transport layer (e.g., of the Open Systems Interconnection (OSI) model). In other words, the TCP connection may span from terminal device **1502** and cloud service **7204** (in contrast to other intermediary connections, such as from terminal device **1502** to network access node **2002** that only encompass part of the overall data path). While by definition TCP connections may not have a ‘timeout’, e.g., a time limit at which point an inactive connection will be terminated, there may be several different scenarios in which the TCP connection between terminal device **1502** and cloud service **7204** may be terminated. For example, security gateways such as firewalls may monitor TCP data (data at the transport layer) and may have TCP connection timeout policies in place that ’close’ inactive TCP connections after a certain duration of inactivity, e.g., after no data has been transmitted for 5 minutes, 10 minutes, 20 minutes, etc. There may be various different locations where such security gateways may be placed. For example, in a case where network access node **2002** is a WLAN access point, a router placed between network access node and the internet may have a security gateway that monitors TCP connections and is capable of closing TCP connections due to timeout. There may be various other locations where security gateways such as firewalls are placed between network access node **2002** and cloud service **7204** that may act as potential locations where the TCP connection may be closed. In a case where network access node **2002** is a cellular base station, there may be a security gateway placed between network access node **2002** and core network **7202.** Additionally or alternatively, there may be a security gateway placed between core network **7202** and the external data networks (including cloud service **7204),** such as at the GiLAN interface between a PGW of core network **7202** and an internet router leading to cloud service **7204.** There may additionally be a security gateway placed at cloud service **7204.** Security gateways may therefore be placed at any number of other points between terminal device **1502** and cloud service **7204** and may selectively terminate inactive TCP connections.

Cloud service **7204** may additionally be configured to close inactive TCP connections. For example, if cloud service **7204** detects that the TCP connection with terminal device **1502** has been inactive for a certain period of time, cloud service **7204** may close the TCP connection. In any such scenario where the TCP connection is closed, terminal device **1502** and cloud service **7204** may need to re-establish the TCP connection in order to continue exchanging data. Such may be expensive in terms of latency, as establishment of a new TCP connection may be a time-consuming procedure. Additionally, terminal device **1502** and cloud service **7204** may not be able to exchange any data until the TCP connection is re-established. Such TCP connection timeout may be inconvenient for a user of terminal device **1502,** as the user will not be able to transmit or receive any data for the application program.

In an exemplary use case, the application program of terminal device **1502** may receive ’push’ notifications from cloud service **7204.** Push notifications may be utilized to provide a brief notification message (e.g., in text form, a visual alert, etc.) related to the application program and may ‘pop up’ on a display of terminal device **1502** to be presented to a user. Cloud service **7204** may thus transmit push notifications to the mobile application of terminal device **1502** via the data connection between terminal device **1502** and cloud service **7204.** The push notifications may therefore pass through core network **7202** and be transmitted by network access node **2002** over the radio access network to terminal device **1502,** which may receive the push notifications and provide the push notifications to the application program.

TCP connection timeout may thus prevent terminal device **1502** from receiving these push notifications (in addition to any other data provided by cloud service **7204**). A user of terminal device **1502** may thus not be able to receive such push notifications until the TCP connection is re-established, which may only occur after a large delay.

In addition to TCP connection timeouts at the transport layer by security gateways, network access node **2002** may also conventionally be configured to close radio bearer connections at radio access layers (for example, at the control plane, e.g., at the RRC of Layer 3 Accordingly, if the radio access bearer spanning between terminal device **1502** and core network **7202** is inactive for a certain period of time, network access node **2002** may be configured to close the radio access bearer. Radio access bearer termination may also require re-establishment of the radio access bearer before network access node **2002** can provide any data to terminal device **1502** on the closed radio access bearer. As a result, if the radio access bearer carrying the data between terminal device **1502** and cloud service **7204** is closed, there may be an excessive delay until the radio access bearer is re-established. Such radio access bearer closures may therefore also prevent terminal device **1502** from receiving data (including push notifications) from cloud service **7204.**

The data connection between terminal device **1502** and cloud service **7204** may therefore be susceptible to connection timeout at the transport layer and radio access layers. The application program of terminal device **1502** may be configured to send ’heartbeats’ to cloud service **7204,** which may be small network packets that terminal device **1502** may transmit to cloud service **7204** to notify cloud service **7204** that the TCP connection remains alive (and prevent cloud service **7204** from closing the TCP connection), which may consequently avoid TCP and radio access bearer connection timeouts. If the connection to cloud service **7204** is not alive, terminal device **1502** may re-establish the connection between the application program and cloud service **7204,** thus enabling the transmission of all new and deferred push notifications. Although described above in the setting of push notifications, TCP connection timeouts may be relevant for any type of data transmitted over such connections.

However, these heartbeats may be transmitted too infrequently to be effective in preventing termination of TCP and radio access bearer connections at network access nodes and/or core network interfaces. Furthermore, even if the heartbeat periodicity was reduced to within typical TCP timeout levels (e.g., 5 minutes), this would impose large battery penalties on terminal devices that would need to wake up at least every 5 minutes to send heartbeats for every open connection.

Accordingly, in some aspects the radio access network may be configured, either at a network access node or at an ‘edge’ computing device, to assume keepalive responsibilities (e.g., connection continuity services) for terminal devices to help ensure that data connections are maintained without being closed. Both TCP and radio access bearer connection timeouts may be addressed, thus allowing terminal devices to maintain data connections without timeout and without having to continually wake up to send heartbeats. As terminal devices may remain in a low-power state while the network access node or edge computing device handles connection continuity services, terminal devices may avoid connection timeouts (thus improving latency) while reducing power consumption.

Cooperation from the radio access network may be relied on to enable such power savings at terminal devices. In a first exemplary option, a network access node may be configured to assume connection continuity services and accordingly may transmit heartbeats to a destination external data network (e.g., cloud service **7204**) on behalf of a terminal device to keep data connections for the terminal device alive. In a second exemplary option, an edge computing device such as a Mobile Edge Computing (MEC, also known as Multi-Access Edge Computing) server positioned at or near the network access node may assume connection continuity services by transmitting heartbeats to a destination external data network on behalf of a terminal device in addition to interfacing with the network access node to prevent connection timeouts by both the network access node and security gateways. Both options may therefore help prevent connection timeouts without requiring the terminal device to send heartbeats.

FIG. **73** shows message sequence chart **7300** illustrating the first exemplary option in which network access node **2002** may assume connection continuity services for terminal device **1502** to prevent connection timeouts according to some aspects. As shown in FIG. **73,** terminal device **1502** may have a data connection in **7302** with cloud service **7204** via network access node **2002** (and core network **7202,** not shown in FIG. **73**), which may be a software-level connection between an application program of terminal device **1502** and cloud service **7204** at the application layer that relies on lower layers including the transport layer (e.g., an end-to-end connection) and radio access layers. It is possible that the data connection may be vulnerable to connection timeouts, such as at a network access node and/or at a security gateway which may close inactive data connections (e.g., TCP connections and/or radio access bearers) after a timeout period has expired in which no data transfer occurred. In order to help avoid such connection timeout, in accordance with some aspects, terminal device **1502** may register with network access node **2002** in **7304** to request that network access node **2002** assume connection continuity services for terminal device **1502.** For example, controller **1610** of terminal device **1502** may transmit control signaling to control module **2610** of network access node **2002** that requests connection continuity services from network access node **2002.** Control module **2610** may accept the keepalive request and register terminal device **1502** in **7306.** Accordingly, network access node **2002** may not locally execute any connection timeouts of data connections for terminal device **1502,** such as closing a radio access bearer, regardless of inactivity on the data connections. To conserve power, terminal device **1502** may also enter a low-power or sleep state following registration in **7304** (which may depend on activity on other data connections).

Additionally, to help avoid timeout connections at other network nodes such as security gateways between network access node **2002** and cloud service **7204,** network access node **2002** (e.g., control module **2610**) may transmit heartbeats to cloud service **7204** at **7308.** To help ensure that other security gateways identify such heartbeats as activity on the data connection between terminal device **1502** and cloud service **7204,** network access node **2002** (e.g., control module **2610**) may transmit the heartbeat over the same data connection. Accordingly, any security gateways monitoring the data connection for inactivity and subsequent timeout may interpret the heartbeat as activity on the data connection and as a result may not close the data connection. Network access node **2002** (e.g., control module **2610** or another dedicated higher layer processor) may also be configured with TCP protocols in order to generate heartbeats to transmit on the data connection to cloud service **7204.**

As security gateways may close data connections based on inactivity timers, network access node **2002** may continually transmit heartbeats at **7310, 7312,** etc., where the periodicity of the heartbeat transmissions at **7308-7312** may be less than an inactivity timer, for example, 5 minutes. The repeated heartbeat transmissions at **7308-7312** may therefore keep the data connection active and avoid connection timeout at security gateways between network access node **2002** and cloud service **7204.** In some aspects, cloud service **7204** may also transmit keepalive messages, which network access node **2002** may respond to in order to maintain the data connection. In a non-limiting example, a cloud service such as a cloud-side initiated software update to terminal device **1502** may wish to maintain the data connection during the update. The cloud service may therefore transmit keepalive messages to ensure that the data connection remains active, which network access node **2002** may decode and respond to.

As the data connection may remain active, cloud service **7204** may identify data addressed to terminal device **1502** in **7314** and transmit the data to terminal device **1502** in **7316.** Accordingly, aspects of the option disclosed in FIG. **73** may enable terminal device **1502** to maintain active data connections with an external data connection without having to continually transmit heartbeats by assigning connection continuity services to network access node **2002.**

Without loss of generality, in some aspects network access node **2002** may utilize a special radio connection state to register terminal device **1502** in **7306.** For example, LTE specifies two radio connectivity states in RRC idle (RRC_IDLE) and RRC connected (RRC_CONNECTED) that define behavior of the radio access connection between terminal device **1502** and network access node **2002.** Other radio access technologies may similarly define multiple radio connectivity states. Network access node **2002** (e.g., control module **2610**) may therefore in some aspects utilize a special radio connectivity state to register terminal devices for connection continuity (keepalive) purposes. Accordingly, upon receipt of a registration request from terminal device **1502** in **7304,** network access node **2002** may register terminal device **1502** with the special radio connectivity state, which may prompt network access node **2002** to assume connection continuity services for terminal device **1502** as described regarding message sequence chart **7300.** In some aspects, the special radio connectivity state may also prevent network access node **2002** from closing radio access bearers for terminal devices registered in the special radio connectivity state. In some aspects, the special radio connectivity state may use a longer connection timeout, which may be longer than the standard timer that is used for general purposes and may result in network access node **2002** waiting for a longer period of time before closing radio access bearers for terminal devices registered in the special radio connectivity state. In some aspects, network access node **2002** may never close radio access bearers for a terminal device that is registered in the special radio connectivity state until the terminal device de-registers from the special radio connectivity state.

In the second exemplary option, an edge computing device such as a MEC server may assume connection continuity services for terminal device **1502** to help ensure that a data connection between terminal device **1502** and cloud service **7204** is not terminated due to inactivity. FIG. **74** shows a network configuration including edge computing server **7402** placed between network access node **2002** and core network **7202** according to some aspects. edge computing server **7402** may be an edge computing device such as a MEC server placed at or near network access node **2002.** Such edge computing devices may perform various cloud processing and data provision to functions at a location at the 'edge' of the cellular network close to the user. Accordingly, edge computing devices may have lower latency in exchanging data with terminal devices and may avoid core network congestion by eliminating the need for data to traverse through the core network. Edge computing server **7402** can be physically placed at network access node **2002** (e.g., at a radio access tower location) or at another location proximate to network access node **2002.** Edge computing server **7402** may be a processor configured to execute program code to perform various processing and data provision operations, where the program code may define the functionality of edge computing server **7402** detailed herein as a set of arithmetic, control, and I/O instructions. Edge computing server **7402** may be configured to retrieve the program code from a non-transitory computer readable medium configured to store the program code.

In addition to conventional edge computing functions, edge computing server **7402** may be configured to assume connection continuity services for terminal devices. Accordingly, edge computing server **7402** may transmit heartbeats on a data connection between terminal device **1502** and cloud service **7204** to help prevent the data connection from being closed, e.g., TCP connection timeout at a security gateway, due to inactivity. Additionally, as edge computing server **7402** may be separate from network access node **2002,** edge computing server **7402** may also need to interface with network access node **2002** to help prevent network access node **2002** from closing the data connection, e.g., by closing a radio access bearer.

FIG. **75** shows message sequence chart **7500** illustrating the second exemplary option according to some aspects in which edge computing server **7402** may assume connection continuity services for terminal device **1502** to help prevent connection timeouts. As shown in FIG. **75,** terminal device **1502** may have a data connection in **7502** with cloud service **7204,** which may be a software-level connection between an application program of terminal device **1502** and cloud service **7204.** To help prevent connection timeout at the transport and radio access layers, terminal device **1502** may register with edge computing server **7402** in **7504** to request that edge computing server **7402** assume connection continuity services for terminal device **1502,** e.g., by controller **1610** transmitting control signaling to edge computing server **7402** that requests connection continuity services from edge computing server **7402.** Edge computing server **7402** may accept the keepalive request and register terminal device **1502** in **7506.** To conserve power, terminal device **1502** may enter a low-power or sleep state following registration in **7504** (which may depend on activity on other data connections).

To help prevent connection timeouts by network access node **2002** at the radio access layers, edge computing server **7402** may notify network access node **2002** in **7508** that the data connection between terminal device **1502** and cloud service **7204** should be maintained. As edge computing server **7402** has instructed network access node **2002** to maintain the data connection, network access node **2002** may not close the data connection at the radio access layers, in other words, may not close the radio access bearer. Alternative to explicitly instructing network access node **2002** to keep the data connection alive, edge computing server **7402** may send heartbeats on the data connection to terminal device **1502.** Accordingly, such heartbeats may pass through network access node **2002** at the radio access layers, which network access node **2002** may interpret as activity on the radio access bearer for the data connection and thus defer closing the radio access bearer. edge computing server **7402** may periodically send heartbeats to help continuously prevent closure of the data connection at the radio access layers by network access node **2002.** Terminal device **1502** may alternatively be configured to exchange control signaling with network access node **2002,** such as to register terminal device 1502 in a special radio connectivity state for terminal devices that wish to maintain data connections, to inform network access node **2002** that the data connection should not be closed.

As shown in FIG. **75,** in some aspects edge computing server **7402** may additionally send heartbeats to cloud service **7204** on the data connection at **7510-7514** to help prevent the data connection from being closed at the transport layer. As previously indicated, security gateways such as firewalls may monitor transport layer data and close TCP connections due to inactivity. As edge computing server **7402** may transmit heartbeats on the data connection, security gateways that are located between edge computing server **7402** and cloud service **7204** may interpret such data traffic as activity on the data connection and keep the data connection open. Edge computing server **7402** may therefore keep the data connection alive on behalf of terminal device **1502** by transmitting heartbeats on the data connection, which may include generating heartbeats at the transport layer and transmitting the heartbeats over the data connection. At **7516,** cloud service **7204** may identify data for terminal device **1502** and may transmit the data over the data connection in **7518.** As edge computing server **7402** has prevented the data connection from being prematurely closed, cloud service **7204** may transmit the data immediately in **7518** without having to re-establish the data connection.

Accordingly, aspects of the first and second options can enable terminal device **1502** to maintain a data connection (such as a TCP connection relying on radio access bearers at the radio access layers) with cloud service **7204** without connection timeouts (e.g., by a network access node or security gateway) and without having to wake up to transmit heartbeats. Terminal devices may therefore reduce power consumption while preventing connection timeout of data connections. Furthermore, as data connections are maintained instead of being torn down, latency may be reduced by avoiding teardown and re-establishment procedures that would be required when connection timeout occurs. Such may be useful in particular for IoT devices such as an IoT Wi-Fi doorbell and/or IoT Wi-Fi security camera. Such IoT devices may thus improve latency and reduce power consumption as they will have immediately available data connections (and thus be able to quickly provide push notifications to a counterpart user handset) without having to constantly perform keepalive.

Although described above in the exemplary setting of TCP connections and TCP connection timeouts, the disclosed aspects may be employed for any similar type of connection, including 'connectionless' protocols such as User Datagram Protocol (UDP) and Quick DUP Internet Connections (QUIC) which may similarly rely on 'heartbeats' to prevent connection timeout.

FIG. **76** shows exemplary method **7600** of performing radio communications at a terminal device in accordance with some aspects. As shown in FIG. **76,** method **7600** includes transmitting or receiving first data over a data connection with a server or network node, wherein the data connection is an end-to-end connection between the terminal device and the server or network node. An instruction is transmitted to a network processing component to transmit one or more connection continuity messages on the data connection to the server or network node for the terminal device (**7620**).

FIG. **77** shows exemplary method **7700** of performing radio communication at a network processing component. As shown in FIG. **77,** method **7700** includes receiving a message from a terminal device that instructs the network processing component to maintain a data connection between the terminal device and a server or network node, wherein the data connection is an end-to-end data connection between the terminal device and the server or network node (**7710**). One or more connection continuity messages on the data connection to the server or network node for the terminal device are transmitted (**7720**).

2.10 Power-Efficiency # 10

In accordance with a further aspect of this disclosure, groups of terminal devices may delegate connection continuity services to an edge computing device, which may then assume connection continuity services for each terminal device based on the individual keepalive requirements for each terminal device. The terminal devices may therefore avoid having to send keepalive messages and may be able to instead enter a low-power state to conserve power. Each group of terminal devices may additionally utilize a 'gateway' technique where one terminal device acts as a gateway device to communicate directly with the radio access network while the remaining terminal devices communicate with a simpler and/or lower-power communication scheme, thus further increasing power savings. These aspects may be used with common channel aspects, e.g., a common channel where an edge computing device assumes connection continuity services for the common channel based on keepalive requirements.

FIG. **78** shows an exemplary network scenario including some aspects that terminal device **1502** may have a data connection with cloud service **7204.** The data connection may be an application layer connection that relies on the transport and radio access layers to route data between terminal device **1502** and cloud service **7204** via network access node **2002,** edge computing server **7402,** and core network **7202.**

In addition to the radio access connection with network access node **2002,** terminal device **1502** may additionally be connected to one or more terminal devices in group network **7802.** The terminal devices of group network **7802** may communicate with one another via a simple and/or low-power communication scheme such as bi-directional forwarding network, a multi-hop network, or a mesh network. Accordingly, terminal device **1502** may act as a gateway device to receive data from network access node **2002** to provide to terminal devices of group network **7802** and receive data from terminal devices of group network **7802** to provide to network access node **2002.** Instead of each of the terminal devices of group network **7802** maintaining a radio access connection directly with network access node **2002,** terminal device **1502** may thus act as an intermediary gateway to provide radio access to the other terminal devices of group network **7802.** The other devices of group network **7802** may therefore communicate with one another on the lower-power communication scheme in order to reduce power consumption. The gateway device may in certain cases switch between the various terminal devices of group network **7802.**

The terminal devices of group network **7802** may therefore each be able to have a data connection, such as with cloud service **7204,** where terminal device **1502** may forward data between the other terminal devices of group network **7802** and network access node **2002.** In some aspects, the terminal devices of group network **7802** may be IoT devices with relatively low data requirements. Accordingly, the amount of data that terminal device **1502** may need to forward between the terminal devices of group network **7802** and network access node **2002** may be manageable. Terminal device **1502** may thus receive data from cloud service **7204** for the data connections of each of the terminal devices of group network **7802** and forward the data to the appropriate terminal device of group network **7802.** Although descriptions are provided various aspects where each terminal device of group network **7802** is connected to cloud service **7204,** various aspects of the disclosure can also apply to cases where different terminal devices of group network **7802** are connected to different external data networks. In such cases, terminal device **1502** may similarly act as a gateway device to relay data between the terminal devices of group network **7802** and network access node **2002,** which may route the data of each data connection to the proper external data network.

As the data connections of the terminal devices of group network **7802** may extend between terminal device **1502** and cloud service **7204,** the data connections may be susceptible to connection timeouts in a manner similar to that noted above regarding FIGs. **58-63.** For example, if there is no activity on a data connection for an extended period of time, a security gateway may close the data connection at the transport layer due to inactivity. Additionally or alternatively, network access node **2002** may terminate the data connection at the radio access layer (e.g., by closing a radio access bearer for the data connection) if the data connection is idle for an extended period of time.

The terminal devices of group network **7802** may each perform keepalive procedures to prevent their respective data connections from being closed. However, such may require that either the terminal devices of group network **7802** each establish a radio access connection to network access node **2002** to transmit heartbeats or that terminal device **1502** forward heartbeats on behalf of the terminal devices of group network **7802,** both of which may require power consumption.

In accordance with an aspect some aspects of this disclosure, the terminal devices of group network **7802** may instead register with edge computing server **7402,** which may assume connection continuity services for group network **7802** and transmit heartbeats to cloud service **7204** on behalf of the terminal devices of group network **7802.** As the terminal devices of group network **7802** may have different keepalive requirements (e.g., connection timeout timers), edge computing server **7402** may manage the different connection continuity services to effectively help prevent closure of any of the data connections. Additionally, in some aspects terminal device **1502** may collaborate with each of the other terminal devices of group network **7802** to provide gateway forwarding services that meet the individual service requirements of each terminal device of group network **7802.** Edge computing server **7402** may also in some aspects interface with network access node **2002** to manage the radio access connection between group network **7802** and network access node **2002,** such as to ensure that the gateway connection from terminal device **1502** and network access node **2002** has radio resources sufficient to support each of the terminal devices of group network **7802.**

FIG. **79** shows an exemplary message sequence chart **7900** according to some aspects. As shown in FIG. **79,** a first terminal device of group network **7802** may have a data connection with cloud service **7204** in **7902.** Terminal device **1502** may have a direct radio access connection with network access node **2002,** where the remaining terminal devices of group network **7802** may indirectly communicate with network access node **2002** by communicating with terminal device **1502** via a local communication scheme (e.g., bidirectional forwarding or a similar scheme for a mesh network) of group network **7802** and relying on terminal device **1502** to forward the data to network access node **2002** over the radio access network. In various other aspects, multiple terminal devices of group network **7802** may communicate with network access node **2002** and provide forwarding for other terminal devices of group network **7802.**

The terminal devices of group network **7802** may rely on edge computing server **7402** to perform connection continuity services on their behalf to help prevent connection timeout. Accordingly, the first terminal device of group **network 7802** may wish to request for edge computing server **7402** to assume connection continuity services on behalf of the first terminal device. As the first terminal device may need to rely on terminal device **1502** as a gateway to edge computing server **7402** (via network access node **2002**), the first terminal device may transmit a request to terminal device **1502** in **7904,** where the request includes an instruction that instructs edge computing server **7402** to perform connection continuity services on behalf of the first terminal device to help prevent connection timeout of the data connection. The request may also specify the type of services that the first terminal device is currently using and/or the type of services that the other terminal devices of group network **7802** is using, which may allow edge computing server **7402** to interface with network access node **2002** to manage the radio resources allocated to group network **7802** via the gateway connection between terminal device **1502** and network access node **2002.**

Terminal device **1502** may then forward the request to edge computing server **7402** in **7906.** Upon receipt of the request in **7908,** edge computing server **7402** may register the first terminal device of group network **7802** for connection continuity services. In addition to connection continuity services, edge computing server **7402** may interface with network access node **2002** to perform IoT service steering to ensure that the 'gateway' radio access connection between terminal device **1502** and network access node **2002** has sufficient resources (e.g., time-frequency resources) to support the services (e.g., the respective data connections) of each terminal device of group network **7802.** Accordingly, edge computing server **7402** may also in **7908** determine the appropriate amount of resources needed for the services of the terminal devices of group network **7802** (which terminal device **1502** may obtain via the request in **7904** and provide to edge computing server **7402** in the forwarding of **7906)** and transmit a steering command to network access node **2002** in **7910** that informs network access node **2002** of the proper resources needed for the gateway radio access connection with terminal device **1502** to support the services of the terminal devices of group network **7802.** Network access node **2002** may then perform resource allocations for the radio access connection with terminal device **1502** based on the steering command, which may include adjusting the resources allocated to the gateway radio access connection with terminal device **1502** based on the steering command, edge computing server **7402** may be able to perform such steering on an individual basis (e.g., for each individual terminal device of group network **7802**) or a group basis (e.g., for multiple terminal devices of group network **7802**). Accordingly, edge computing server **7402** may ensure that the gateway radio access connection between terminal device **1502** and network access node **2002** has radio resources sufficient to support each of the terminal devices of group network **7802.**

In some aspects, network access node **2002** may additionally employ a special radio connectivity state for the terminal devices of group network **7802,** such as a special RRC state. Such may be particularly applicable in cases where the terminal devices of group network **7802** are IoT devices, which may have substantially different radio access connection requirements from ’smart’ terminal devices such as smartphones, tablets, laptops, etc. In some cases where network access node **2002** utilizes such a special radio connectivity state for terminal devices of group network **7802,** the terminal devices of group network **7802** may retain radio resources (e.g., still remain connected) but may be able to enter an energy-efficient or low-power state for extended durations of time without network access node **2002** tearing down the radio access connection. In some aspects, network access node **2002** may be configured to register terminal devices in the special radio connectivity state upon receipt of a steering command (e.g., as in **7910**) and/or after exchange of control signaling with terminal devices that trigger assignment of the special radio connectivity state.

Edge computing server **7402** may assume connection continuity services to help prevent the data connection with cloud service **7204** from being closed, such as by service gateways that close inactive TCP connections. For example, edge computing server **7402** may repeatedly send heartbeats to cloud service **7204** on the data connection at **7912, 7914,** and **7916.** As previously described, service gateways placed between edge computing server **7402** and cloud service **7204** (such as at a firewall at the GiLAN interface) may interpret such heartbeats as activity, which may help prevent the service gateways from closing the data connection (e.g., at the transport layer). The data connection of the first terminal device may therefore be kept alive without requiring that the first terminal device actively transmit heartbeats to cloud service **7204.**

In some aspects, edge computing server **7402** may additionally handle connection continuity services for groups of terminal devices, such as the terminal device of group network **7802.** For example, each of the terminal devices of group network **7802** may have a respective data connection with cloud service **7204,** such as in an exemplary case where the terminal devices of group network **7802** are IoT devices each connected to the same cloud server in cloud service **7204.** Accordingly, each of the terminal devices of group network **7802** may need to ensure that their respective data connection with cloud service **7204** is kept alive. Instead of individually transmitting heartbeats to cloud service **7204** over their respective data connections, the terminal devices of group network **7802** may each register with edge computing server **7908,** e.g., in the manner of **7904-7908** via terminal device **1502.** Edge computing server **7908** may then assume connection continuity services for each of the terminal devices of group network **7802** by transmitting heartbeats on each respective data connection, for example, as in the manner of **7912-7916.** The terminal device of group network **7802** may each register with edge computing server **7402** individually or in a joint process, such as by instructing terminal device **1502** to forward a joint request to edge computing server **7402** that instructs edge computing server **7402** to perform connection continuity services for each of the terminal devices of group network **7802.**

In certain scenarios, the terminal devices of group network **7802** may have data connections with different keepalive requirements and that may require heartbeats with different periodicities in order to help prevent connection timeouts. The terminal devices of group network **7802** may therefore need to specify the keepalive requirements of each terminal device to edge computing server **7402.** Edge computing server **7402** may then need to evaluate the individual keepalive requirements and subsequently need to transmit heartbeats on each data connection according to the individual keepalive requirements in order to maintain each data connection. Additionally or alternatively, in some aspects the terminal devices of group network **7802** may have data connections with different destinations, e.g., may not all have data connections with cloud service **7204.** In such cases, edge computing server **7402** may transmit heartbeats to the various different destinations for each of the terminal devices of group network **7802.**

Continuing with the setting of FIG. **79,** edge computing server **7402** may maintain the data connection between terminal device **1502** and cloud service **7204** for the first terminal device (in addition to other terminal devices of group network **7802** if applicable). Accordingly, when cloud service **7204** identifies data intended for the first terminal device in **7918,** cloud service **7204** may immediately transmit the data over the data connection (without having to re-establish the data connection as would be the case if the data connection was closed). Cloud service **7204** may thus transmit the data to terminal device **1502** in **7920,** which may forward the data to the first terminal device **7922** via group network **7802.**

While the terminal devices of group network **7802** may not maintain 'direct' radio access connections with network access node **2002** (instead relying on the gateway radio access connection via terminal device **1502**), in some aspects the terminal devices of group network **7802** may maintain active communications with one another via a lower-power communication scheme of group network **7802.** For example, the terminal devices of group network **7802** may wake up to communicate with one another according to a certain 'liveliness rate'. Accordingly, terminal device **1502** may receive the data from cloud service in **7920** and wait for the next active cycle of group network **7802** to forward the data to the first terminal device in **7922.** The liveliness rate may depend on the service requirements of the terminal devices of group network **7802.** Accordingly, if a terminal device of group network **7802** has low latency requirements, group network **7802** may utilize a high liveliness rate where the terminal devices of group network **7802** wake up frequently. The liveliness rate may be adaptive and may be independent from the rate at which edge computing server **7402** needs to transmit heartbeats to cloud service **7204.**

Edge computing server **7402** may therefore be configured to perform both steering and keepalive for groups of terminal devices, where the steering may ensure that the terminal devices of the group have sufficient resources (e.g., via a gateway radio access connection) to support their services and keepalive may help ensure that the data connections for the terminal devices will not be closed. As described above regarding FIG. **79,** in some aspects edge computing server **7402** may be able to control both steering and keepalive on an individual basis (e.g., for a single terminal device in the group) or on a group basis (e.g., for two or more of the terminal devices in the group). Furthermore, in some aspects group network **7802** may be configured to send updated requests as in **7904,** either periodically or when a triggering condition occurs e.g., if a keepalive requirement or steering-related requirement of one or more of the terminal devices of group network **7802** changes. Terminal device **1502** may thus be configured to again forward the request in **7906** to edge computing server **7402,** which may adjust the steering (via an updated steering command in **7910**) and/or the keepalive operations (via heartbeats in **7912-7916** according to a different schedule).

In some aspects, edge computing server **7402** may additionally be configured to perform steering and keepalive for multiple groups of terminal devices, where edge computing server **7402** may separately handle resource steering and keepalive for each group of devices separately based on the resource and keepalive requirements of the terminal devices in each group. Accordingly, in a scenario with a first group of IoT devices of a first type and a second group of IoT devices of a second type, edge computing server **7402** may assume connection continuity services for both groups by transmitting heartbeats according to the keepalive requirements of the first group and transmitting heartbeats according to the keepalive requirements of the second group.

Since stationary IoT devices may not be mobile and will have light data connection requirements, it may be useful for these devices to remain in an energy-efficient or low-power state for extended periods of time. Exemplary cases may include systems of IoT-enabled streetlamps/streetlights, vending machines, etc. One terminal device of the group may act as a gateway terminal device to provide a radio access connection and may execute a local communication scheme with the rest of the terminal devices in the group, which may include forwarding data between the other terminal devices and the radio access connection. The terminal devices may rely on a MEC server to maintain data connections to external data networks for each terminal device, thus enabling the terminal devices to avoid actively maintaining each individual connection. If data arrives for one of the terminal devices at the gateway terminal device, the gateway terminal device may forward the data to the destination terminal device using the local communication scheme. The edge computing server may also handle steering by issuing steering commands to the network access node to ensure that the radio access connection between the gateway terminal device and the network access node has sufficient resources to support the services of all the terminal devices in the group.

FIG. **80** shows exemplary method **8000** for performing radio communications according to some aspects. As shown in FIG. **80,** method **8000** includes receiving one or more requests specifying instructions to perform connection continuity services for one or more data connections of a plurality of terminal devices **(8010).** Connection continuity requirements are evaluated for each of the one or more data connections to determine a connection continuity message schedule **(8020).** Connection continuity messages are transmitted on the one or more data connections according to the connection continuity message schedule **(8030).**

FIG. **81** shows exemplary method **8100** for performing radio communications according to some aspects. As shown in FIG. **81,** method **8100** includes receiving one or more requests from a gateway terminal device for a plurality of terminal devices, wherein the one or more requests specify connection continuity requirements and data traffic requirements of one or more data connections of the plurality of terminal devices **(8110).** Connection continuity messages are transmitted on the one or more data connections according to the connection continuity requirements specified of the one or more data connections **(8120).** A network access node is interfaced with to arrange for a radio access connection between the network access node and the gateway terminal device to include radio resources that meet the data traffic requirements of the one or more data connections **(8130).**

2.11 Power-Efficiency #11

According to a further aspect of this disclosure, autonomously moving vehicles or devices connected to a wireless network may conserve power by 'desensitizing' (either powering down or only partially desensitizing, e.g., lowering resolution or frequency) certain sensors when notified over the wireless network that no or limited obstacles or other vehicles or devices are present, e.g., during low traffic situations or a simple environments (e.g., empty airspace). For example, autonomously moving vehicles or devices such as drones, balloons, satellites, robots, smart cars, trucks, buses, trains, ships, submarines, etc., may navigate and steer with the assistance of sensors that detect obstacles and allow the autonomously moving vehicles or devices to avoid collisions. However, these navigation sensors used for collision-free movement may have high power consumption and consequently result in battery drain. To reduce power consumption, an autonomously moving device may, with the cooperation of a wireless network or another vehicle or device, identify scenarios in which certain navigation sensors may be desensitized. Specifically, a network access node may provide information to the autonomously moving vehicle or device via a wireless network that its surrounding vicinity is free of other autonomously moving vehicles or devices (which may likewise be connected to the same wireless network) and/or other moving objects or static obstacles, in other words, that the autonomous vehicle or device has low traffic surroundings or no obstacles e.g., a mountain or a closed railway crossing. As the autonomously moving vehicle or device may assume the surrounding vicinity is free of autonomous moving devices or moving objects or static obstacles, the autonomously moving vehicle or device may then shut down or partially desensitize sensors used for motion control, e.g., location sensors, etc. (yielding a reduction in power consumption) or used for detecting static obstacles, e.g., radar sensors, etc. Autonomously moving vehicles or devices may thus reduce power consumption while still avoiding collisions and make way. These aspects can be used with common channel aspects, e.g., a common channel carrying information for determining power down or desensitization levels.

Aspects discussed herein can be implemented in any of a variety of different autonomous moving devices including aerial drones, moving robots, smart cars and other autonomous vehicles, etc., which may be configured to perform autonomous navigation and steering across a number of different terrains (e.g., ground, air, water, underwater, space, etc.). These autonomous moving devices may rely on navigational sensors (including image/video sensors, radar sensors, motion sensors, laser scanners, ultrasonic/sonar sensors, accelerometer/gravitational sensors, positional/GPS sensors, etc.) to both steer along a target path and to avoid collisions with obstacles. Autonomous moving devices may aim to avoid collisions with both mobile and immobile obstacles. For example, autonomous robots working in a warehouse or industrial worksite may attempt to avoid immobile obstacles such as shelving/outdoor storage/buildings, walls, boxes/containers, hills/holes/other natural obstacles, etc., and mobile obstacles such as other autonomous robots, human workers, human-operated vehicles, animals, etc. Aerial drones working in an outdoor environment may attempt to avoid immobile obstacles such as buildings/towers/power lines/telephone poles/other manmade structures, trees, etc., in addition to mobile obstacles such as other aerial drones, planes, birds, etc. Due to the lack of movement, detection of immobile obstacles may in many cases be easier than detection of mobile obstacles. Accordingly, an autonomous moving device may be able to detect immobile obstacles with less-sensitive sensors than needed to detect mobile obstacles. For example, an autonomous moving device may be able to detect immobile obstacles with less accurate or less reliable sensors than needed to detect mobile obstacles. Additionally, autonomous moving devices may have certain low-sensitivity sensors that are only effective for detecting immobile obstacles and other high-sensitivity sensors that can detect both mobile and immobile obstacles. Furthermore, higher-sensitivity sensors may be needed in high-traffic surroundings, e.g., when many obstacles are nearby, to help ensure that all obstacles can be detected and avoided.

Accordingly, in scenarios where an autonomous moving device only aims to detect immobile obstacles or where only a small number of obstacles are nearby, the autonomous moving device may be able to use less sensitive sensors. The autonomous moving device may therefore be able to either desensitize certain high-sensitivity sensors (e.g., sensors used for detecting mobile obstacles or sensors that are needed to detect many obstacles in high-traffic surroundings) and subsequently utilize the remaining low-sensitivity sensors for navigation and steering. As low-sensitivity sensors (including higher sensitivity sensors that are being operated at lower performance levels) may generally consume less power than high-sensitivity sensors, the autonomous moving device may be able to reduce power consumption while still avoiding obstacles.

Accordingly, in some aspects, an autonomous moving device may rely on cooperation from a wireless network to identify such low traffic scenarios. For example, the autonomous moving device may be connected to a wireless network to which other autonomous moving devices are also connected. Network access nodes of the wireless network may therefore have access to information about the locations of the other autonomous moving devices, such as through positional reporting by the autonomous moving devices or sensing networks. In some aspects, network access nodes may additionally use local or external sensors to detect the presence of other mobile and immobile obstacles to likewise determine the locations of such obstacles. A network access node may thus be able to determine when the autonomous moving device is in low-traffic surroundings, e.g., when the surrounding vicinity is free of certain obstacles and/or only contains a limited number of obstacles, and provide control signaling to the autonomous moving device that has low-traffic surroundings. As 'full' sensitivity sensors may not be required in low-traffic surroundings, the autonomous moving device may receive such control signaling and proceed to desensitize certain sensors, thus reducing power consumption while still avoiding collisions.

The network access node may monitor the locations of the other autonomous moving devices and other obstacles relative to the autonomous moving device and inform the autonomous moving device via control signaling when the surrounding traffic situation changes, e.g., when another autonomous moving device or other obstacle enters the surrounding vicinity of the autonomous moving device. As higher traffic surroundings may warrant operation of sensors at higher sensitivity to detect and avoid obstacles, the autonomous moving device may then reactivate (e.g., increase the sensitivity of) the previously desensitized sensors to detect the presence of obstacles and avoid collisions.

An autonomous moving device may also be able to desensitize certain sensors depending on which types of obstacles are in its surrounding vicinity. For example, if only immobile obstacles are in its surrounding vicinity, an autonomous moving device may be able to shut down any sensors used for detecting mobile obstacles. Likewise, if no other autonomous moving devices are in its surrounding vicinity, an autonomous moving device may be able to desensitize any sensors exclusively used for detecting autonomous moving devices. Accordingly, a network access node monitoring the traffic situation of an autonomous moving device may additionally inform the autonomous moving device of what types of obstacles are in its surrounding vicinity in order to enable the autonomous moving device to selectively desensitize certain sensors.

Cooperation from a network access node in a wireless network may be relied on to inform an autonomous moving device when low-traffic scenarios occur that would allow the autonomous moving device to desensitize (including both power down and reducing the sensitivity) of navigational sensors, in particular navigational sensors used for detecting mobile obstacles. FIG. **82** shows network some aspects of autonomous moving devices **8202, 8204, 8206, 8208,** and **8210** operating in a geographical area. Examples include, without limitation, robots working in a factory or warehouse, autonomous vehicles working in an industrial complex, aerial delivery drones working in an urban environment, etc.

The autonomous moving devices **8202-8210** may rely on navigational sensors to provide input to guide navigation and steering. Accordingly, autonomous moving devices **8202-8210** may navigate and steer to a target destination while avoiding collisions with immobile and mobile obstacles that are detected with the navigational sensors. Autonomous moving devices **8202-8210** may also be connected to network access node **8212** via respective radio access connections and may accordingly be able to exchange data with network access node **8212.**

Network access node **8212** may be configured to monitor the locations of autonomous moving devices **8202-8210** and identify scenarios when the surrounding vicinity of any of autonomous moving devices **8202-8210** is low-traffic, for example, free of obstacles or only containing a limited number of obstacles. For example, network access node **8212** may identify that surrounding vicinity **8214** of autonomous moving device **8202** is low-traffic and may provide control signaling to autonomous moving device **8202** indicating that surrounding vicinity **8214** is low-traffic, where surrounding vicinity **8214** may be a predefined radius or area. Autonomous moving device **8202** may then be configured to desensitize (either shut off or partially reduce the sensitivity of) certain sensors used to detect other autonomous moving devices and/or mobile obstacles and to perform navigation and steering using remaining active sensors, which may include desensitized active sensors in addition to basic or emergency collision sensors. Autonomous moving device **8202** may therefore reduce power consumption while still avoiding collisions.

FIG. **83** shows an internal configuration of network access node **8212** according to some aspects, which may provide a radio access network to autonomous moving devices **8202-8210** (optionally in conjunction with other network access nodes not explicitly shown in FIG. **82**). Network access node **8212** may be configured to utilize any of variety of different radio access technologies to provide the radio access network, such as any short range or cellular radio access technology. Network access node **8212** may transmit and receive wireless radio signals with antenna system **8302** and may perform radio frequency, physical layer, and control processing with communication module **8304.** Communication module **8304** may be configured to perform the radio frequency, physical layer, and control processing in the same manner as previously described regarding radio module **2604,** physical layer module **2608,** and control module **2610** of network access node **2002.** Accordingly, communication module **8304** may include components configured with equivalent functionality.

Network access node **8212** may additionally include control module **8306,** which may be configured to manage the functionality of network access node **8212.** Control module **8306** may be configured to monitor the positions of autonomous moving devices and/or other obstacles to identify scenarios where the surrounding vicinity of an autonomous moving device is free of or only contains a limited number of autonomous moving devices and/or other obstacles. When control module **8306** identifies such low-traffic scenarios, control module **8306** may provide control signaling to the autonomous moving device that informs the autonomous moving device that it is in low-traffic surroundings.

As shown in FIG. **83,** control module **8306** may receive input from communication module **8304,** local sensor array **8308,** and external sensor input **8310.** Control module **8306** may process these inputs to determine and monitor the locations of autonomous moving devices and/or other obstacles and subsequently to identify scenarios where the surrounding vicinity of an autonomous moving device is free of or only contains a limited number of autonomous moving devices and/or other obstacles. Control module **8306** may then transmit control signaling to the autonomous moving device via communication module **8304** and antenna system **8302** to inform the autonomous moving device that it has low-traffic surroundings. Control module **8306** may be may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware) stored in a non-transitory computer-readable storage medium, or as a mixed hardware-defined and software-defined module. The functionality of control module **8306** described herein may therefore be embodied in software and/or hardware. In some aspects, control module **8306** may be a processor.

FIG. **84** shows an exemplary internal configuration of autonomous moving device **8202** according to some aspects, which may be any type of autonomous moving device including, without limitation, an aerial drone, a moving robot, a smart car or other autonomous vehicle, etc. One or more of autonomous moving devices **8204-8210** may also be configured in the same manner. As shown in FIG. **84,** autonomous moving device **8202** may include antenna system **8402** and communication module **8404,** which may be configured to perform radio communications with network access node **8212.** Autonomous moving device **8202** may transmit and receive radio signals with antenna system **8402** and may perform radio frequency, physical layer, and control processing with communication module **8404.** Communication module **8404** may be configured to perform the radio frequency, physical layer, and control processing in the same manner as previously described regarding antenna system **1602,** RF transceiver **1604,** physical layer processing module **1608,** and controller **1610** of terminal device **1502.** Accordingly, communication module **8404** may include components configured with equivalent functionality.

Navigation control module **8406** may be responsible for controlling the movement of autonomous moving device **8202.** Navigation control module **8406** may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware) stored in a non-transitory computer-readable storage medium, or as a mixed hardware-defined and software-defined module. The functionality of navigation control module **8406** described herein may therefore be embodied in software and/or hardware. As shown in FIG. **84,** navigation control module **8406** may receive input from sensor array **8410,** which may include one or more sensors such as image/video sensors/cameras, radar sensors, motion sensors, laser scanners, ultrasonic/sonar sensors, accelerometer/gravitational sensors, positional/GPS sensors, etc. The sensors of sensor array **8410** may each obtain sensor data from the environment of autonomous moving device **8202** and provide the sensor data to navigation control module **8406.** Navigation control module **8406** may then utilize the sensor data to make navigation and steering decisions, such as to navigate autonomous moving device **8202** to a target designation while avoiding any mobile or immobile obstacles detected by sensor array **8410.** Navigation control module **8406** may thus render navigation and steering decisions and issue commands to steering/movement system **8408** to move according to the navigation and steering decisions. Steering/movement system **8408** may thus be configured to physically move autonomous moving device **8202.** Steering/movement system **8408** may thus be a movement system compatible with the device type of autonomous moving device **8202.** Accordingly, steering/movement system **8408** may be any type of movement system including e.g., wheel or tread system, an aerial propeller or rotor system, an outboard or inboard aquatic motor, a marine propulsion system, a jet propulsion system, a bipedal/quadrupedal or similar 'walking' system, etc.

As noted above, the sensors of sensor array **8410** may have different capabilities and may have varying effectiveness in certain scenarios to detect certain types of obstacles. Additionally, the sensitivity of the sensors of sensor array **8410** may be adjustable. For example, navigation control module **8406** may be able to turn on and off sensors of sensor array **8410,** thus switching the sensitivity of the sensors of sensor array **8410** between full sensitivity (on) and no sensitivity (off). Alternatively, navigation control module **8406** may be configured to adjust operational parameters of the sensors of sensor array **8410** to adjust the sensitivity of the sensors between full sensitivity and no sensitivity. For example, navigation control module **8406** may be configured to adjust a measurement frequency of one or more sensors of sensor array **8410,** which may be the frequency at which measurements are taken. Navigation control module **8406** may thus be able to increase and decrease the sensitivity of the sensors of sensor array **8410,** where sensor sensitivity may generally be directly proportional to power consumption. Accordingly, operation of a sensor of sensor array **8410** at full sensitivity may consume more power than operation of the sensor at low or no sensitivity. Navigation control module **8406** may also be able to adjust the sensitivity of a sensor of sensor array **8410** by adjusting the processing complexity or algorithmic complexity of the sensor data obtained from the sensor, where reduced processing complexity or algorithmic complexity may reduce power consumption by navigation control module 8406. Navigation control module **8406** may therefore be configured to selectively increase and decrease the sensitivity of the sensors of sensor array **8410,** which may consequently increase and decrease power consumption at navigation control module **8406.**

Additionally, in some aspects navigation control module **8406** may utilize certain sensors of sensor array **8410** for different purposes. For example, navigation control module **8406** may utilize one or more sensors of sensor array **8410** for detection of immobile obstacles while utilizing one or more other sensors of sensor array **8410** for detection of mobile obstacles. Additionally, in some aspects navigation control module **8406** may also utilize certain sensors of sensor array **8410** exclusively to detect other autonomous moving devices. In some aspects, one or more other sensors of sensor array **8410** may be used for detecting multiple of mobile obstacles, immobile obstacles, or autonomous moving devices and may be able to selectively turn on and off a ‘mobile obstacle detection mode’, ‘immobile obstacle detection mode’, or ‘autonomous moving device detection mode’. Furthermore, in some aspects navigation control module **8406** may be able to operate sensors of sensor array **8410** at lower sensitivity levels to detect immobile obstacles but may need to operate sensors of sensor array **8410** at higher sensitivity levels to detect mobile obstacles. In some aspects, one or more sensors of sensor array **8410** may also be basic or ’emergency’ collision sensors that are low-power and only suitable for simple detection of objects, e.g., as a last resort in case other sensors fail.

As previously indicated, various aspects of power, autonomous moving device **8202** may rely on cooperation from network access node **8212** to identify scenarios in which there is low chance of collision with other autonomous moving devices and/or mobile obstacles and subsequently desensitize one or more sensors of sensor array **8410.** FIG. **85** shows an exemplary message sequence chart **8500** in accordance with some aspects. As previously described, network access node **8212** may be configured to determine the locations of autonomous moving devices **8202-8210** and/or other obstacles, which control module **8306** may perform based on any one or more of location reports, local sensor data, or external sensor data. For example, autonomous moving devices **8202-8210** may each determine their respective locations (e.g., at navigation control module **8406** using a location sensor of sensor array **8410**) and report their respective locations to network access node **8212** in **8502** and **8504** (e.g., by transmitting control signaling from navigation control module **8406** via communication module **8404** and antenna system **8402**) as shown in message sequence chart **8500.** Autonomous moving device **8202-8210** may be configured to periodically report their locations according to a fixed period and/or if a movement condition is triggered, e.g., if movement is detected that exceeds a predefined threshold.

Control module **8306** of network access node **8212** may therefore receive the location reports in **8502** and **8504.** In addition to utilizing location reports to determine the locations of autonomous moving devices **8202-8210,** in some aspects control module **8306** may additionally monitor sensor data provided by local sensor array **8308** and external sensor input **8310.** Specifically, local sensor array **8308** may be located at network access node **8212** and may be positioned to sense obstacles. For example, in a warehouse robot scenario, network access node **8212** may be positioned in a central location of the warehouse with the sensors of local sensor array **8308** positioned facing outwards around network access node **8212.** The sensors of local sensor array **8308** may be thus be able to detect various obstacles around network access node **8212,** where network access node **8212** may be deployed in a location from which local sensor array **8308** can detect obstacles near autonomous moving devices **8202-8210.**

In some aspects, control module **8306** of network access node **8212** may additionally receive sensor data from an external sensor network via external sensor input **8310.** FIG. **86** shows an exemplary external sensor network including external sensors **8602, 8604, 8606,** and **8608** in accordance with some aspects. As shown in FIG. **86,** external sensors **8602-8608** may be positioned around network access node **8212** within the operating area of autonomous moving devices **8202-8210.** Accordingly, external sensors **8602-8608** may be positioned to detect both autonomous moving devices in addition to other proximate obstacles. Network access node **8212** may interface with external sensors **8602-8608** either via a wired or wireless connection, where the wireless connection may utilize the same or different radio access network as provided by antenna system **8302** and communication module **8304.** Accordingly, external sensor input **8310** of network access node **8212** may be a wired or wireless input (and may potentially be the same as communication module **8304**) that receives sensor data from an external sensor data network.

Control module **8306** may therefore utilize some or all of local sensor data (from local sensor array **8308**), external sensor data (from external sensor input **8310**), and location reports (from autonomous moving devices **8202-8210**) to determine the locations of autonomous moving devices and/or other obstacles. As shown in message sequence chart **8500,** in some aspects control module **8306** may continuously monitor location reports, local sensor data, and external sensor data to determine obstacle locations in **8506.** Accordingly, control module **8306** may process the raw location information (e.g., location reports, local sensor data, and external sensor data) to determine the positions of autonomous moving devices **8202-8210** and any other obstacles. While the location reports may specify the location of autonomous moving devices **8202-8210,** control module **8306** may process the sensor data to determine the positions of other obstacles. Control module **8306** may utilize any type of sensor-based object location technique to process the sensor data to identify the positions of other obstacles, including both mobile and immobile obstacles.

Control module **8306** may continuously monitor the location reports and sensor data to track the locations of autonomous moving devices **8202-8210** and other obstacles. In some aspects, control module **8306** may compare the locations of each of autonomous moving devices **8202-8210** to the locations of the other autonomous moving devices **8202-8210** and to the locations of the detected obstacles to determine whether the surrounding vicinity of any of autonomous moving devices **8202-8210** contains any obstacles.

For example, as shown in FIG. **82,** surrounding vicinity **8214** (e.g., an area of predefined size) of autonomous moving device **8202** may be free of autonomous moving devices **8204-8210** and other obstacles. Accordingly, upon comparing the locations of autonomous moving devices **8202-8210** and any detected obstacles, control module **8306** may determine in **8508** that surrounding vicinity **8214** is free of obstacles. Control module **8306** may then provide control signaling to autonomous moving device **8202** in **8510** that informs autonomous moving device **8202** that its surrounding vicinity **8214** is free of obstacles (e.g., by transmitting the control signaling via communication module **8304** and antenna system **8302** over the radio access connection).

Navigation control module **8406** of autonomous moving device **8202** may receive the control signaling in **8510** (e.g., via antenna system **8402** and navigation control module **8406**). As the control signaling specifies that surrounding vicinity **8214** of autonomous moving device **8202** is free of obstacles, autonomous moving device **8202** may not need to operate sensor array **8410** at full sensitivity (and full power) and may consequently desensitize one or more sensors of sensor array **8410** in **8512,** thus reducing power consumption.

Specifically, as navigation control module **8406** may assume that surrounding vicinity **8214** is free of all obstacles, navigation control module **8406** may be able to shut down all sensors of sensor array **8410,** desensitize all sensors of sensor array **8410** to emergency or basic collision detection levels, shut down all sensors of sensor array **8410** except specific emergency or basic collision sensors, etc.

In an alternative scenario, control module **8306** may determine in **8508** that surrounding vicinity **8214** is free of mobile obstacles (e.g., free of autonomous moving devices **8204-8210** and any other mobile obstacles) but contains one or more immobile obstacles (which control module **8306** may detect with sensor data). Control module **8306** may then provide control signaling to autonomous moving device **8202** in **8510** that indicates that surrounding vicinity **8214** contains only immobile obstacles. As previously described, one or more sensors of sensor array **8410** may be exclusively dedicated to detecting mobile obstacles while other sensors of sensor array **8410** may be used for detecting immobile obstacles. As the control signaling specified that surrounding vicinity **8214** is free of mobile obstacles, navigation control module **8406** may be able to desensitize the sensors of sensor array **8410** in **8512** that are dedicated to detecting mobile obstacles by either turning off these sensors or by partially reducing the sensitivity of these sensors. For example, navigation control module **8406** may initially operate a given sensor of sensor array **8410** that is dedicated to detecting mobile obstacles at a first sensitivity level and may reduce the sensitivity of the sensor to a second sensitivity level that is less than the first sensitivity level in **8512.** In some aspects, navigation control module **8406** may reduce the sensitivity of sensors of sensor array **8410** that are dedicated to detecting mobile obstacles in addition to reducing the sensitivity of other sensors of sensor array **8410,** such as e.g., sensors dedicated to detecting immobile obstacles. For example, navigation control module **8406** may reduce the sensitivity of the sensors dedicated to mobile obstacle detection by a comparatively greater amount (e.g., by relative or absolute measures) than the sensors dedicated to immobile obstacle detection. In some aspects, if one or more sensors of sensor array **8410** are configured to detect both mobile and immobile obstacles and have toggleable mobile and immobile obstacle detection modes, navigation control module **8406** may deactivate the mobile obstacle detection mode and autonomous moving device detection mode while keeping the immobile obstacle detection mode active. As toggling of detection modes at sensors involves configuring sensor array to detect more or less obstacles, this can also be considered a type of desensitization.

Furthermore, as mobile obstacles may generally require higher sensitivity to detect, in some aspects navigation control module **8406** may also be able to partially reduce the sensitivity of sensors of sensor array **8410** that are used for detection of both mobile and immobile obstacles in **8512.** For example, a first sensitivity level of a given sensor of sensor array **8410** may be suitable for detection of both mobile and immobile obstacles while a second sensitivity level lower than the first sensitivity level may be suitable for detection of immobile obstacles but unsuitable for detection of mobile obstacles. Accordingly, upon receipt of the control signaling in **8510,** navigation control module **8406** may be configured to reduce the sensitivity of the given sensor from the first sensitivity level to the second sensitivity level.

In some aspects, navigation control module **8406** may also desensitize sensor array **8410** in **8512** by reducing the processing of sensor data performed at navigation control module **8406.** For example, navigation control module **8406** may be configured to periodically receive and process inputs from the sensors of sensor array **8410** according to a set period, where low periods may result in more processing than high periods. Accordingly, navigation control module **8406** may desensitize sensor array **8410** in **8512** by increasing the period, which may consequently also reduce both the amount of processing and power expenditure at navigation control module **8406.** Navigation control module **8406** may also be configured to reduce the processing or algorithmic complexity of processing the sensor data from sensor array **8410** to reduce sensitivity and consequently reduce power consumption.

Such scenarios in which surrounding vicinity **8214** is free of all obstacles or free of mobile obstacles can be generalized as 'low-traffic scenarios', where autonomous moving device **8202** may desensitize sensor array **8410** in such low-traffic scenarios to conserve power. In some aspects control module **8306** of network access node **8212** may be responsible for monitoring location reports and/or sensor data to identify low-traffic scenarios and subsequently notify autonomous moving device **8202.** There may be other types of low-traffic scenarios, such as where surrounding vicinity **8214** only contains a limited number of obstacles, does not contain any other autonomous moving devices, etc. For example, control module **8306** may be configured to monitor location reports and sensor data in **8506** to determine when the surrounding vicinity of an autonomous moving device contains only light traffic in **8508,** e.g., when autonomous moving device **8202** is in low-traffic surroundings. For example, instead of determining that surrounding vicinity **8214** is free of all obstacles or contains only immobile obstacles, control module **8306** may utilize location reports and sensor data in **8506** to determine when surrounding vicinity **8214** contains only a limited number of obstacles, e.g., 1, 2, 3, etc., mobile obstacles and/or 1, 2, 3, etc., immobile obstacles. Depending on the numbers and/or types (mobile vs. immobile) of obstacles in surrounding vicinity **8214,** control module **8306** may be configured to classify the traffic situation and identify scenarios with 'low' traffic (which may rely on predefined criteria that classify low-traffic scenarios based on the numbers and types of obstacles). Upon identification of a low traffic scenario in surrounding vicinity **8214,** control module **8306** may provide control signaling to autonomous moving device **8202** in **8510** to inform autonomous moving device **8202** of the low traffic scenario. Navigation control module **8406** may then receive such control signaling and desensitize sensor array in **8512.** As low traffic scenarios may involve some obstacles in surrounding vicinity **8214,** navigation control module **8406** may not completely shut off sensor array **8410.** However, navigation control module **8406** may either partially desensitize sensor array **8410** to a sensitization level sufficient to avoid collisions in low traffic, where the sensitization level may not be sufficient to avoid collisions in high traffic, or may shut off all sensors except for emergency or basic collision sensors. In some aspects, network access node **8212** may additionally specify in the control signaling of **8510** which types of obstacles are part of the low-traffic scenario, e.g., the quantity of each of autonomous moving devices, other mobile obstacles, and immobile obstacles that are in surrounding vicinity **8214.** Navigation control module **8406** may then be able to selectively desensitize sensors of sensor array **8410** (and/or activate and deactivate certain detection modes if applicable) depending on which type of obstacles each sensor of sensor array **8410** is configured to detect. Alternatively, in some aspects, network access node **8212** may be configured to classify traffic situations based on a predefined traffic levels, e.g., a first level, a second level, a third level, etc., which may each indicate varying amounts of traffic. Network access node **8212** may specify the current traffic level to autonomous moving device **8202** via control signaling in **8510.** Autonomous moving device **8202** may then desensitize sensor array **8410** based on the traffic level indicated by network access node **8212,** where autonomous moving device **8202** may operate sensor array **8410** at a low sensitivity level when network access node **8212** indicates low traffic levels, a medium sensitivity level when network access node **8212** indicates medium traffic levels, a high sensitivity level when network access node **8212** indicates high traffic levels, etc.

In some aspects, network access node **8212** may be configured to monitor the location of other autonomous moving devices but may not be able to detect other obstacles, such as if network access node **8212** is configured to receive location reports from autonomous moving devices but does not have local or external sensor data to detect other obstacles. Accordingly, network access node **8212** may be able to notify autonomous moving device **8202** in **8510** when surrounding vicinity **8214** is free of autonomous moving devices **8204-8210** (or alternatively only contains 1, 2, 3, etc. autonomous moving devices) but may not be able to specify whether surrounding vicinity **8214** contains any other mobile obstacles. Similar to the low traffic scenario described above, in some aspects navigation control module **8406** may then partially desensitize sensor array **8410** in **8512** to a sensitivity level that is sufficient to avoid collisions in low traffic scenarios but not for high traffic scenarios. Alternatively, in some aspects navigation control module **8406** may desensitize specific sensors of sensor array **8410** that are configured to exclusively detect other autonomous moving devices. In some aspects, navigation control module **8406** may reduce the sensitivity of sensors of sensor array **8410** that are dedicated to detecting autonomous vehicles in addition to reducing the sensitivity of other sensors of sensor array **8410,** such as e.g., sensors dedicated to detecting immobile obstacles. For example, navigation control module **8406** may reduce the sensitivity of the sensors dedicated to mobile obstacle detection by a comparatively greater amount (e.g., by relative or absolute measures) than the sensors dedicated to immobile obstacle detection. As the traffic of other obstacles may not be known, such may be particularly applicable for scenarios where there is assumed to be a low number of other obstacles in the operating area of autonomous moving vehicles **8204-8210.**

Regardless of the specific type of desensitization employed by navigation control module **8406,** navigation control module **8406** may reduce the sensitivity of sensor array **8410** in **8512,** which may consequently reduce power consumption at autonomous moving device **8202.** Navigation control module **8406** may then control autonomous moving device **8202** to navigate and steer with steering/movement system **8408** based on the sensor data obtained from desensitized sensor array **8410.** As network access node **8212** has indicated in **8510** that surrounding vicinity **8214** is low traffic, navigation control module **8406** may still be able to detect low numbers of obstacles with desensitized sensor array **8410** and steer along a target path by avoiding any detected obstacles.

Navigation control module **8406** may continue to navigate and steer autonomous moving device **8202** with sensor array **8410** in a desensitized state. Consequently, control module **8306** may in some aspects continue tracking the locations of obstacles in the operating area of autonomous moving devices **8202-8210** to notify autonomous moving device **8202** if traffic conditions in surrounding vicinity **8214** change, which may potentially require reactivation of sensor array **8410** (or reactivation of certain detection modes) to a higher sensitivity level if traffic conditions increase. As shown in message sequence chart **8500,** control module **8306** of network access node **8212** may continue to monitor location reports and/or sensor data to track the locations of obstacles relative to autonomous moving devices **8202-8210.** At a later point in time, one or more obstacles may eventually move within surrounding vicinity **8214** of autonomous moving device **8202,** which may change the traffic situation in surrounding vicinity **8214.** For example, autonomous moving device **8210** may move within surrounding vicinity **8214** (which may be as a result of movement of one or both of autonomous moving device **8202** and autonomous moving device **8210**), which control module **8306** may detect based on location reports received from autonomous moving devices **8202** and **8210.** Additionally or alternatively, control module **8306** may detect that one or more mobile or immobile obstacle has moved within surrounding vicinity **8214** in **8514** (due to movement of one or both of autonomous moving device **8202** and the obstacles).

As the traffic situation has changed, control module **8306** may notify autonomous moving device **8202** of the change in its surrounding traffic situation by providing control signaling to autonomous moving device **8202** in **8516.** As the control signaling may indicate to navigation control module **8406** that surrounding vicinity **8214** has greater traffic (e.g., an increased number of mobile and/or immobile obstacles), navigation control module **8406** may re-activate desensitized sensors of sensor array **8410** in **8518** (including re-activating certain detection modes that were previously deactivated). For example, if navigation control module **8406** previously desensitized sensors of sensor array **8410** dedicated to detecting mobile obstacles and the control signaling indicates that surrounding vicinity **8214** now contains mobile obstacles, navigation control module **8406** may increase the sensitivity of the previously desensitized sensors, e.g., to the previous pre-desensitization level or to another sensitivity level depending on the traffic situation reported in the control signaling. Navigation control module **8406** may then proceed to navigate and steer autonomous moving device **8202** using the reactivated sensors of sensor array **8410.**

In a more general setting, control module **8306** may continually provide traffic situation updates to navigation control module **8406** via control signaling that indicate the current traffic situation (e.g., the number and/or types of obstacles) in surrounding vicinity **8214.** If the control signaling indicates increased traffic in surrounding vicinity **8214,** navigation control module **8406** may respond by increasing the sensitivity level of sensor array **8410,** which may also include increasing the sensitivity of certain sensors (e.g., sensors dedicated to detection of mobile obstacles) of sensor array **8410** based on the types of sensors and types of traffic. Conversely, if the control signaling indicates decreased traffic in surrounding vicinity **8214,** navigation control module **8406** may respond by decreasing the sensitivity level of sensor array **8410,** which may also include decreasing the sensitivity of certain sensors (e.g., sensors dedicated to detection of mobile obstacles) of sensor array **8410** based on the types of sensors and types of traffic.

Accordingly, instead of continuously operating sensor array **8410** at full sensitivity, which may yield high power consumption, in some aspects navigation control module **8406** may instead increase and decrease the sensitivity of sensor array **8410** based on traffic situation updates provided by network access node **8212.** Such may enable navigation control module **8406** to conserve power while still avoiding collisions by adapting the sensitivity of sensor array **8410** according to the traffic situations indicated by network access node **8212.**

Additionally or alternatively, in some aspects network access node **8212** may utilize its coverage area to determine when a surrounding vicinity of autonomous moving device 8202 is free of other autonomous moving devices. FIG. **87** shows an exemplary network scenario according to some aspects where network access node **8212** may provide a radio access network in conjunction with multiple other network access nodes, where each of the network access nodes may have a coverage area and serve autonomous moving devices within its own coverage area. Network access node **8212** may therefore know which autonomous moving devices are in its coverage area on the basis of which autonomous moving devices are being served by network access node **8212.** Accordingly, in the scenario of FIG. **87,** network access node **8212** (e.g., control module **8306)** may identify that autonomous moving device **8202** is the only autonomous moving device in its coverage area. Network access node **8212** may then provide control signaling to autonomous moving device **8202** that indicates that autonomous moving device **8202** is the only autonomous moving device in the coverage area of network access node **8212.** Autonomous moving device **8202** may consequently desensitize sensor array **8410,** such as by utilizing a sensitivity level suitable for low-traffic situations, by shutting off sensors that are dedicated to detecting other autonomous moving devices, and/or by turning off an autonomous moving device mode at one or more sensors of sensor array **8410.** This deployment option may enable network access node **8212** to rely solely on information regarding which autonomous moving devices are in its coverage area as opposed to relying on location reports and sensor data. However, network access node **8212** may utilize location reports and/or sensor data in conjunction with served autonomous moving device information to monitor the traffic situation in its coverage area.

Additionally or alternatively, in some aspects network access node **8212** may utilize a planned movement path of autonomous moving device **8202** to provide traffic situation updates to autonomous moving device **8202.** FIG. **88** shows an exemplary network scenario in which autonomous moving device **8202** may be moving along planned movement path **8802,** which may be selected by navigation control module **8406.** Autonomous moving device **8202** may report planned movement path **8802** to network access node **8212,** which may then utilize location reports and/or sensor data to monitor planned movement path **8802** to determine whether any obstacles are in or will enter planned movement path **8802.** If network access node **8212** detects that planned movement path **8802** is free of autonomous moving devices **8204-8210** and other obstacles or only contains light traffic, network access node **8212** may provide control signaling to autonomous moving device **8202** that indicates the traffic situation of planned movement path **8802.** Network access node **8212** may continue to monitor the traffic situation of planned movement path **8802** and provide any necessary traffic situation updates to autonomous moving device **8202** via control signaling. Autonomous moving device **8202** may then control the sensitivity of sensor array **8410** based on the traffic situation updates to reduce power consumption while still avoiding collisions. Furthermore, each of autonomous moving devices **8204-8210** may also provide planned movement paths to network access node **8212.** Network access node **8212** may then compare the planned movement paths of each of autonomous moving device **8204-8210** to planned movement path **8802** to determine the traffic situation of planned movement path **8802** and subsequently notify autonomous moving device **8202.**

Additionally or alternatively, in some aspects network access node **8212** and autonomous moving devices **8202-8210** may additionally utilize predefined traffic 'rules' that constrain the movement of autonomous moving devices **8202-8210.** For example, autonomous moving devices **8202-8210** may be restricted to movement along a system of predefined 'lanes' and 'intersections' according to specific rules for entering and leaving, changing directions, and other permitted maneuvers. An exemplary scenario may be a warehouse or industrial site defined with a floorplan having predefined lanes and intersections, an aerial zone with predefined air traffic control lanes, etc. In such a scenario, autonomous moving device **8202** may decrease the sensitivity of sensor array **8410** as fewer collisions with other autonomous moving devices may be possible. Additionally, in scenarios where network access node **8212** acts a 'mission control' node to oversee the movement paths of autonomous moving devices **8202-8210** (potentially where autonomous moving devices **8202-8210** operate in a coordinated 'fleet', e.g., for drones), the number of events to be monitored and the amount of sensor data and commands transmitted between autonomous moving device **8202** and network access node **8212** may be reduced. Network access node **8212** may then control the route of autonomous moving devices **8202-8210** by tracking a limited number of foreseeable collision events and, in the case of congestion, re-calculate the route and sends instructions to autonomous moving devices **8202-8210** for the new route. Autonomous moving devices **8202-8210** may utilize basic collision sensors to react to unforeseeable events.

Additionally or alternatively, in some aspects, network access node **8212** may be a 'master' autonomous moving device that provides a wireless network to autonomous moving devices **8202-8210.** Accordingly, as opposed to being a stationary base station or access point, network access node/master autonomous moving device **8212** may additionally be configured with a navigation control module and steering/movement system and may also navigate and steer using local sensor array **8308.** Network access node/master autonomous moving device **8212** may monitor location reports and sensor data and provide traffic situation updates to autonomous moving devices **8202-8210** in the same manner as described above.

Furthermore, in some aspects autonomous moving device **8202-8210** may rely on a 'master' autonomous moving device for sensing and collision avoidance. FIG. **89** shows an exemplary network scenario according to some aspects in which autonomous moving devices **8202** may be connected to master autonomous moving device **8902.** Master autonomous moving device **8902** may be configured in a similar manner as autonomous moving device **8202** as depicted in FIG. **84.** However, master autonomous moving device **8902** may have a larger battery capacity and/or more sensitive sensor array. Master autonomous moving device **8902** may maintain a radio connection with network access node **8212** and each of autonomous moving devices **8202-8210,** which may utilize the same or different radio access technologies (which may require separate instances of antenna systems and communication modules to support each radio access technology). Master autonomous moving device **8902** may perform sensing with its sensor array and provide control signaling to autonomous moving devices **8202-8210** to inform autonomous moving devices **8202-8210** of the surrounding traffic situation, such as whether any obstacles are in the surrounding vicinity of each of autonomous moving devices **8202-8210.** Autonomous moving devices **8202-8210** may then adjust the sensitivity of their respective sensor arrays based on the traffic situations reported by master autonomous moving device **8902.** Additionally or alternatively, in some aspects master autonomous moving device **8902** may directly provide sensor data or obstacle locations from its sensor array to autonomous moving devices **8202-8210,** which autonomous moving devices **8202-8210** may utilize in place of operating their respective sensor arrays. Autonomous moving devices **8202-8210** may thus be able to significantly desensitize their respective sensor arrays, such as by shutting down all sensors except for basic collision sensors.

Additionally or alternatively, in some aspects autonomous moving devices **8202-8210** may provide sensor data or obstacle locations to one another (which may not rely on a master autonomous moving device). Accordingly, autonomous moving devices **8202-8210** may coordinate with one another to provide sensor data and obstacle locations. This may enable some of autonomous moving devices **8202-8210** desensitize their respective sensor arrays while other of autonomous moving devices **8202-8210** utilize their sensor arrays to obtain sensor data and obstacle locations to provide to the other of autonomous moving devices **8202-8210.** In some aspects, all of autonomous moving devices **8202-8210** may be able to partially desensitize their respective sensor arrays and exchange sensor data or obstacle information with one another to compensate for the desensitization. In some aspects, autonomous moving devices **8202-8210** may take turns desensitizing their sensor arrays while some of autonomous moving devices **8202-8210** obtain sensor data and obstacle locations to provide to those of autonomous moving devices **8202-8210** that have desensitized their sensor arrays.

Implementations of these aspects can be realized in any environment, including any of the aforementioned ground, air, water, underwater, space, etc. Each environment may provide specific scenarios and use cases based on the unique environment-specific characteristics and properties. For example, in an aerial drone setting, autonomous moving devices **8202-8210** may need to avoid collisions with birds, which may fly in flocks. Such collision avoidance may be unique to such an environment (or e.g., for underwater vehicles and marine life) and may present solutions specific to an aerial environment. For example, if confronted by a flock of birds, a master drone may be configured to control the other drones group together and follow an 'imposing' drone or a small group of imposing drones designed to scare away birds with its appearance. The drones may thus be able to avoid collisions by grouping together under the control of the master drones and, once clear of the flock of birds, may be able to desensitize their sensor arrays if no other obstacles are nearby.

Additionally, in some aspects where people, such as workers, carrying terminal devices connected to network access node **8212** are within the operating area of autonomous moving devices **8202-8210,** network access node **8212** may additionally utilize the terminal devices in order to track movement of the workers and treat the workers as mobile obstacles. Network access node **8212** may rely on information about how many terminal devices are within its coverage area (e.g., in the manner of FIG. **87**) and/or rely on location reports provided by the terminal devices in order to track the location of the terminal devices and thus determine whether a surrounding vicinity of any of autonomous moving devices **8202-8210** are free of workers and/or in low traffic scenarios. Network access node **8212** may then provide traffic situation updates to e.g., autonomous moving device **8202** detailing the presence of any workers carrying terminal devices, other autonomous moving devices, other mobile obstacles, other immobile obstacles, etc. If workers are in the operating area of network access node **8212** that are not carrying terminal devices connected to network access node **8212,** network access node **8212** may also be able to detect the workers as mobile obstacles via sensor data.

Accordingly, autonomous moving devices may receive traffic situation information related to collision avoidance and utilizing the traffic situation information to adjust collision sensor sensitivity. As described above, such may enable autonomous moving devices to reduce power consumption by reducing sensor sensitivity in low traffic situations.

FIG. **90** shows exemplary method **9000** of operating a moving device according to some aspects. As shown in FIG. **90,** method **9000** includes navigating the moving device with one or more collision sensors configured at a first sensitivity level **(9010).** A traffic update is received, from a wireless network, a traffic update that characterizes obstacle traffic in a surrounding vicinity of the moving device **(9020).** The one or more collision sensors are configured to operate with a second sensitivity level if the traffic update indicates that obstacle traffic meets a predefined criteria **(9030).**

## 3 Context-Awareness

Designers and manufacturers may aim to optimize device and network operation in order to improve a variety of functions such as battery life, data throughput, network load, radio interference, etc. As detailed below for the various aspects of this disclosure related to context-awareness, the collection and processing of context information, including device location and movement, past user activity and routines, history or usage patterns of mobile and desktop applications, etc., may provide a valuable mechanism to optimize such functions. These aspects may be used with other power saving methods described herein, e.g., the use of context information only when needed, or adapting the schedule of context information to reduce power and increase operation time.

FIG. **91** shows radio communication network **9100** in accordance with some aspects, which may include terminal devices **9102** and **9104** in addition to network access nodes **9110** and **9112.** Although certain aspects of this disclosure may describe certain radio communication network setting (such as an LTE, UMTS, GSM, other 3rd Generation Partnership Project (3GPP) networks, WLAN/Wi-Fi, Bluetooth, 5G, mmWave, device-to-device (D2D), etc.), the subject matter detailed herein is considered demonstrative in nature and may therefore be analogously applied to any other radio communication network. The number of network access nodes and terminal devices in radio communication network **9100** is exemplary and is scalable to any amount.

Accordingly, in an exemplary cellular setting network access nodes **9110** and **9112** may be base stations (e.g., eNodeBs, NodeBs, Base Transceiver Stations (BTSs), etc.) while terminal devices **9102** and **9104** may be cellular terminal devices (e.g., Mobile Stations (MSs), User Equipments (UEs), etc.). Network access nodes **9110** and **9112** may therefore interface (e.g., via backhaul interfaces) with a cellular core network such as an Evolved Packet Core (EPC, for LTE), Core Network (CN, for UMTS), or other cellular core network, which may also be considered part of radio communication network **9100.** The cellular core network may interface with one or more external data networks. In an exemplary short-range setting, network access node **9110** and **9112** may be access points (APs, e.g., WLAN or Wi-Fi APs) while terminal device **9102** and **9104** may be short range terminal devices (e.g., stations (STAs)). Network access nodes **9110** and **9112** may interface (e.g., via an internal or external router) with one or more external data networks.

Network access nodes **9110** and **9112** (and other network access nodes of radio communication network **9100** not explicitly shown in FIG. **91**) may accordingly provide a radio access network to terminal devices **9102** and **9104** (and other terminal devices of radio communication network **9100** not explicitly shown in FIG. **91**). In an exemplary cellular setting, the radio access network provided by network access nodes **9110** and **9112** may enable terminal devices **9102** and **9104** to wirelessly access the core network via radio communications. The core network may provide switching, routing, and transmit for traffic data related to terminal devices **9102** and **9104** and may provide access to various internal (e.g., control nodes, other terminal devices on radio communication network **9100,** etc.) and external data networks (e.g., data networks providing voice, text, multimedia (audio, video, image), and other Internet and application data). In an exemplary short-range setting, the radio access network provided by network access nodes **9110** and **9112** may provide access to internal (e.g., other terminal devices connected to radio communication network **9100**) and external data networks (e.g., data networks providing voice, text, multimedia (audio, video, image), and other Internet and application data).

The radio access network and core network (if applicable) of radio communication network **9100** may be governed by network protocols that may vary depending on the specifics of radio communication network **9100.** Such network protocols may define the scheduling, formatting, and routing of both user and control data traffic through radio communication network **9100,** which includes the transmission and reception of such data through both the radio access and core network domains of radio communication network **9100.** Accordingly, terminal devices **9102** and **9104** and network access nodes **9110** and **9112** may follow the defined network protocols to transmit and receive data over the radio access network domain of radio communication network **9100** while the core network may follow the defined network protocols to route data within and outside of the core network. Exemplary network protocols include LTE, UMTS, GSM, WiMAX, Bluetooth, Wi-Fi, mmWave, etc., any of which may be applicable to radio communication network **9100.**

FIG. **92** shows an internal configuration of terminal device **9102**according to some aspects, which may include antenna system **9202,** radio frequency (RF) transceiver **9204,** baseband modem **9206** (including physical layer processing module **9208** and controller **9210**), application processor **9212,** memory **9214,** power supply **9216,** sensor **9218,** and sensor **9220.** Although not explicitly shown in FIG. **92,** terminal device **9102** may include one or more additional hardware, software, and/or firmware components (such as processors/microprocessors, controllers/microcontrollers, other specialty or generic hardware/processors/modules, etc.), peripheral device(s), memory, power supply, external device interface(s), subscriber identify module(s) (SIMs), user input/output devices (display(s), keypad(s), touchscreen(s), speaker(s), external button(s), camera(s), microphone(s), etc.), etc.

In an abridged operational overview, terminal device **9102** may transmit and receive radio signals on one or more radio access networks. Baseband modem **9206** may direct such communication functionality of terminal device **9102** according to the communication protocols associated with each radio access network, and may execute control over antenna system **9202** and RF transceiver **9204** in order to transmit and receive radio signals according to the formatting and scheduling parameters defined by each communication protocol. Although various practical designs may include separate communication components for each supported radio access technology (e.g., a separate antenna, RF transceiver, physical layer processing module, and controller), for purposes of conciseness the configuration of terminal device **9102** shown in FIG. **92** depicts only a single instance of each such components.

Terminal device **9102** may transmit and receive radio signals with antenna system **9202,** which may be a single antenna or an antenna array comprising multiple antennas and may additionally include analog antenna combination and/or beamforming circuitry. In the receive path (RX), RF transceiver **9204** may receive analog radio frequency signals from antenna system **9202** and perform analog and digital RF front-end processing on the analog radio frequency signals to produce digital baseband samples (e.g., In-Phase/Quadrature (IQ) samples) to provide to baseband modem **9206.** RF transceiver **9204** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **9204** may receive digital baseband samples from baseband modem **9206** and perform analog and digital RF front-end processing on the digital baseband samples to produce analog radio frequency signals to provide to antenna system **9202** for wireless transmission. RF transceiver **9204** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **9206** to produce the analog radio frequency signals for wireless transmission by antenna system **9202.** Baseband modem **9206** may control the RF transmission and reception of RF transceiver **9204,** including specifying the transmit and receive radio frequencies for operation of RF transceiver **9204.**

As shown in FIG. **92,** baseband modem **9206** may include physical layer processing module **9208,** which may perform physical layer (Layer 1) transmission and reception processing to prepare outgoing transmit data provided by controller **9210** for transmission via RF transceiver **9204** and prepare incoming received data provided by RF transceiver **9204** for processing by controller **9210.** Physical layer processing module **9208** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Physical layer processing module **9208** may be structurally realized as a hardware-defined module, e.g., as one or more dedicated hardware circuits or FPGAs, as a software-defined module, e.g., as one or more processors configured to retrieve and execute program code defining arithmetic, control, and I/O instructions (e.g., software and/or firmware instructions) stored in a non-transitory computer-readable storage medium, or as a mixed hardware-defined and software-defined module. Although not explicitly shown in FIG. **92,** physical layer processing module **9208** may include a physical layer controller configured to control the various hardware and software processing components of physical layer processing module **9208** in accordance with physical layer control logic defined by the communications protocol for the relevant radio access technologies. Furthermore, while physical layer processing module **9208** is depicted as a single component in FIG. **92,** physical layer processing module **9208** may be collectively composed separate sections of physical layer processing components where each respective section is dedicated to the physical layer processing of a particular radio access technology.

Terminal device **9102** may be configured to operate according to one or more radio access technologies, which may be directed by controller **9210.** Controller **9210** may thus be responsible for controlling the radio communication components of terminal device **9102** (antenna system **9202,** RF transceiver **9204,** and physical layer processing module **9208)** in accordance with the communication protocols of each supported radio access technology, and accordingly may represent the Access Stratum and Non-Access Stratum (NAS) (also encompassing Layer 2 and Layer 3) of each supported radio access technology. Controller **9210** may be structurally embodied as a protocol processor configured to execute protocol software (retrieved from a controller memory) and subsequently control the radio communication components of terminal device **9102** in order to transmit and receive communication signals in accordance with the corresponding protocol control logic defined in the protocol software.

Controller **9210** may therefore be configured to manage the radio communication functionality of terminal device **9102** in order to communicate with the various radio and core network components of radio communication network **9100,** and accordingly may be configured according to the communication protocols for multiple radio access technologies. Controller **9210** may, for example, be a unified controller that is collectively responsible for all supported radio access technologies (e.g., LTE and GSM/UMTS) or may comprise multiple controllers where each controller may be a dedicated controller for a particular radio access technology, such as a dedicated LTE controller and a dedicated legacy controller (or alternatively a dedicated LTE controller, dedicated GSM controller, and a dedicated UMTS controller). Regardless, controller **9210** may be responsible for directing radio communication activity of terminal device **9102** according to the communication protocols of the LTE and legacy networks. As previously noted regarding physical layer processing module **9208,** one or both of antenna system **9202** and RF transceiver **9204** may similarly be partitioned into multiple dedicated components that each respectively correspond to one or more of the supported radio access technologies. Depending on the specifics of each such configuration and the number of supported radio access technologies, controller **9210** may be configured to control the radio communication operations of terminal device **9102** in accordance with a master/slave RAT hierarchical or multi-SIM scheme.

Terminal device **9102** may also include application processor **9212,** memory **9214,** and power supply **9216.** Application processor **9212** may be a CPU configured to execute various applications and/or programs of terminal device **9102** at an application layer of terminal device **9102,** such as an Operating System (OS), a User Interface (UI) for supporting user interaction with terminal device **9102,** and/or various user applications. The application processor may interface with baseband modem **9206** as an application layer to transmit and receive user data such as voice data, audio/video/image data, messaging data, application data, basic Intemet/web access data, etc., over the radio network connection(s) provided by baseband modem **9206.**

Memory **9214** may embody a memory component of terminal device **9102,** such as a hard drive or another such permanent memory device. Although depicted separately in FIG. **92,** in some aspects baseband modem **9206** and/or application processor **9212** may each have a dedicated memory, such as a dedicated baseband memory integrated into or interfacing with baseband modem **9206** and/or a dedicated application-layer memory integrated into or interfacing with application processor **9212.** Additionally or alternatively, in some aspects baseband modem **9206** may utilize a memory connected to application processor **9212.** Although not explicitly depicted in FIG. **92,** the various other components of terminal device **9102** shown in FIG. **92** may additionally each include integrated permanent and non-permanent memory components, such as for storing software program code, buffering data, etc.

Power supply **9216** may be an electrical power source that provides power to the various electrical components of terminal device **9102.** Depending on the design of terminal device **9102,** power supply **9216** may be a 'finite' power source such as a battery (rechargeable or disposable) or an 'indefinite' power source such as a wired electrical connection. Operation of the various components of terminal device **9102** may thus pull electrical power from power supply **9216.**

Sensors **9218** and **9220** may be sensors that provide sensor data to application processor **9212.** Sensors **9218** and **9220** may be any of a location sensor (e.g., a global navigation satellite system (GNSS) such as a Global Positioning System (GPS)), a time sensor (e.g., a clock), an acceleration sensor/gyroscope, a radar sensor, a light sensor, an image sensor (e.g., a camera), a sonar sensor, etc. Although shown as connected with application processor **9212** in FIG. **92,** in some aspects sensors **9218** and **9220** can interface with baseband modem **9206** (e.g., via a hardware interface). Baseband modem **9206** may then route sensor data to application processor **9212.**

In accordance with some radio communication networks, terminal devices **9102** and **9104** may execute mobility procedures to connect to, disconnect from, and switch between available network access nodes of the radio access network of radio communication network **9100.** As each network access node of radio communication network **9100** may have a specific coverage area, terminal devices **9102** and **9104** may be configured to select and reselect between the available network access nodes in order to maintain a strong radio access connection with the radio access network of radio communication network **9100.** For example, terminal device **9102** may establish a radio access connection with network access node **9110** while terminal device **9104** may establish a radio access connection with network access node **9112.** In the event that the current radio access connection degrades, terminal devices **9102** or **9104** may seek a new radio access connection with another network access node of radio communication network **9100;** for example, terminal device **9104** may move from the coverage area of network access node **9112** into the coverage area of network access node **9110.** As a result, the radio access connection with network access node **9112** may degrade, which terminal device **9104** may detect via radio measurements such as signal strength or signal quality measurements of network access node **9112.** Depending on the mobility procedures defined in the appropriate network protocols for radio communication network **9100,** terminal device **9104** may seek a new radio access connection (which may be triggered at terminal device **9104** or by the radio access network), such as by performing radio measurements on neighboring network access nodes to determine whether any neighboring network access nodes can provide a suitable radio access connection. As terminal device **9104** may have moved into the coverage area of network access node **9110,** terminal device **9104** may identify network access node **9110** (which may be selected by terminal device **9104** or selected by the radio access network) and transfer to a new radio access connection with network access node **9110.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

FIG. **93** shows an internal configuration of a network access node such as network access node **9110** as introduced in FIG. **91,** which may be configured to execute method **10200.** As shown in FIG. **93,** network access node **9110** may include antenna system **9302,** radio module **9304,** and communication module **9306** (including physical layer module **9308** and control module **9310**). In an abridged overview of the operation of network access node **9110,** network access node **9110** may transmit and receive radio signals via antenna system **9302,** which may be an antenna array comprising multiple antennas. Radio module **9304** may perform transmit and receive RF processing in order to convert outgoing digital data from communication module **9306** into analog RF signals to provide to antenna system **9302** for radio transmission and to convert incoming analog RF signals received from antenna system **9302** into digital data to provide to communication module **9306.** Physical layer module **9308** may be configured to perform transmit and receive PHY processing on digital data received from radio module **9304** to provide to control module **9310** and on digital data received from control module **9310** to provide to radio module **9304.** Control module **9310** may control the communication functionality of network access node **9110** according to the corresponding radio access protocols, e.g., LTE, which may include exercising control over antenna system **9302,** radio module **9304,** and physical layer module **9308.** Each of radio module **9304,** physical layer module **9308,** and control module **9310** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware instructions) stored in a non-transitory computer-readable storage medium, or as a mixed hardware-defined and software-defined module. In some aspects, radio module **9304** may be a radio transceiver including digital and analog radio frequency processing and amplification circuitry. In some aspects, radio module **9304** may be a software-defined radio (SDR) component implemented as a processor configured to execute software-defined instructions that specify radio frequency processing routines. In some aspects, physical layer module **9308** may be include a processor and one or more hardware accelerators, wherein the processor is configured to control physical layer processing and offload certain processing tasks to the one or more hardware accelerators. In some aspects, control module **9310** may be a controller configured to execute software-defined instructions that specify upper-layer control functions. In some aspects, control module **9310** may be limited to radio communication protocol stack layer functions, while in other aspects control module **9310** may also be responsible for transport, internet, and application layer functions.

Network access node **9110** may thus provide the functionality of network access nodes in radio communication networks by providing a radio access network to enable served terminal devices to access desired communication data. For example, communication module **9306** may interface with a core network and/or one or more internet networks, which may provide access to external data networks such as the Internet and other public and private data networks.

Radio communication networks may be highly dynamic due to a variety of factors that impact radio communications. For example, terminal devices **9102** and **9104** may move (e.g., by a user) to various different positions relative to network access nodes **9110** and **9112,** which may affect the relative distances and radio propagation channels between terminal devices **9102** and **9104** and network access node **9110** and **9112.** The radio propagation channels may also vary due to factors unrelated to mobility such as interference, moving obstacles, and atmospheric changes. Additionally, local conditions at terminal device **9102** and **9104,** such as battery power, the use of multiple radio access technologies, varying user activity and associated data traffic demands, etc., may also impact radio communication. Radio communications may also be affected by conditions at network access nodes **9110** and **9112** in addition to the underlying core network, such as network load and available radio resources.

The radio communication environment between terminal devices **9102** and **9104** and network access nodes **9110** and **9112** may thus be in a constant state of flux. In order to operate effectively and enhance user experience, terminal devices **9102** and **9104** and network access nodes **9110** and **9112** may need to recognize such changes and adapt operation accordingly.

Radio communication systems may therefore react to changes in the surrounding environment using 'context awareness', in which, for example, terminal devices or the radio access network may utilize context information that characterizes the radio environment in order to detect and respond to changes. Thus, in some aspects, the various aspects of this disclosure related to context-awareness solutions present techniques and implementations to optimize user experience and radio communication performance via the use of context awareness.

3.1 Context-Awareness #1

In some aspects of this disclosure, a terminal device may utilize context information to optimize power consumption and/or data throughput during movement through areas of varying radio coverage. In particular, a terminal device may predict when or where the poor and strong radio coverage will occur and schedule radio activity such as cell scans and/or data transfers based on the predictions, which may enable the terminal device to conserve power by avoiding unnecessary failed cell scans and to optimize data transfer by executing transfers in high throughput conditions. In another aspect, the collection or processing of context information may be provided by a network node, e.g., a base station, mobile edge computing node, server node, cloud service, etc.

Some terminal devices may utilize context information in a limited manner to optimize single 'platforms', such as to optimize operation of a single application program or to conserver power at a hardware level. FIG. **94** depicts exemplary usages of context information at different platforms in accordance with some aspects. For example, application programs (e.g., executed at application processor **9212**) such as personal assistants, travel assistants, navigational programs, etc., may rely on application-layer context information such as the routines, habits, and scheduled plans of a user of the application program to predict user behavior and make user-specific suggestions and tracking. A navigation program may make driving route suggestions based on past routes, make travel plan suggestions based on past user destinations or past user searches, provide flight updates based on previously purchased airline tickets, etc. Such information may be provided to the application program by a user at the application layer and recycled within the application program to predict user behavior and subsequently adapt interaction with the user. Additionally, an operating system (e.g., executed at application processor **9212**) may also recycle local context information to adapt operation If an application requests a background sync at a time when the device is in poor conditions, and when a user of terminal device **9102** is unlikely to see the application, then the operating system could stall the request until a later time. The decision is made as a combination of the habits and the signal environment. If it is a foreground request, then the request may not be ignored. The hardware of application processor **9212** may also interact with the operating system of application processor **9212** in order to perform background process management and usage-based suppression with local context information. Modem hardware (e.g., of baseband modem **9206**) may also utilize local context information for power control (e.g., Advanced Configuration and Power Interface (ACPI)). A non-limiting example, application processor **9212** can be duty-cycled where the period of the duty cycle is adapted based on the usage patterns of the user. For example, if it is known that the user is not going to be using the device for an extended period of time in a day, and that non-critical tasks can be postponed, application processor **9212** can be put to sleep. Another non-limiting example, application processor **9212** can be duty-cycled where the period of the duty cycle is adapted based on the frequency of services, e.g., synchronization of emails.

As introduced above, various aspects of this disclosure may apply high-level context information to optimize radio activity on predicted radio conditions. Specifically, various aspects may, for example, observe user behavior (e.g., user of a mobile terminal device, users of mobile terminal devices proximate to each other, users of mobile terminal devices in a cell, area or space, etc.) to identify user-specific routines, habits, and schedules in order to predict user travel routes and subsequently optimize radio activity such as cell scans and data transfer along predicted routes. For example, by anticipating when or where a user will be in poor radio coverage along a known route (e.g., depending on base station or access point coverage, spectrum use, spectrum congestion, etc), a terminal device may, for example, suspend cell scans and/or data transfer until improved radio coverage is expected. As repeated cell scans and data transfer in low or no coverage scenarios may waste considerable battery power, terminal devices may therefore reduce power consumption and extend battery life. Additionally, in some aspects terminal devices may predict which network access nodes will be available along a predicted travel route and may utilize such information to make radio and radio access selections, such as selecting certain cells, certain networks (e.g., Public Land Mobile Networks (PLMNs)), certain RATs, certain SIMS, or certain transceivers. Terminal devices may also optimize battery life time based on expected charging times. In some aspects, terminal devices may also be able to predict radio coverage on a more fine-grained scale, such as by examining a recent trace of radio measurements and other context information to predict radio conditions for near-future time instant (e.g., in the order of milliseconds or seconds).

FIG. **95** illustrates an exemplary application of some aspects of this disclosure to a road or path travel scenario. As shown in FIG. **95,** road **9502** may be located in the vicinity of coverage area **9500** of network access node **9110.** In an exemplary scenario, a user of terminal device **9102** may travel on road **9502** as part of a normal routine, such as on their everyday work route, a morning or evening walking routine, a frequent bicycling or jogging route, etc. While terminal device **9102** may be in coverage of network access node **9110** for certain sections of road **9502,** other sections such as section **9504** of road **9502** may fall outside of coverage area **9500.** Terminal device **9102** may therefore have low or no signal coverage (e.g., poor radio coverage) when the user is driving along section **9504** (e.g., where no other network access nodes may be nearby to provide coverage to section **9504**). Similar scenarios may, for example, occur in coverage 'holes' in coverage area **9500** (not explicitly shown in FIG. **95**), or if a user of terminal device **9102** travels out-of-town, e.g., to go hiking or skiing, which may produce longer time periods of poor radio coverage.

According to some operation scenarios, terminal device **9102** may repeatedly perform cell scans while moving along section **9504.** However, in particular if section **9504** is a large distance, e.g., several miles, terminal device **9102** may waste considerable power in performing numerous failed cell scans. Certain solutions may employ 'backoff' techniques, such as exponential or linear backoffs. For example, if terminal device **9102** does not detect any cells during a series of cell scans, terminal device **9102** may start a backoff counter that increases exponentially or linearly with each successive failed cell scan. However, while the number of failed cell scans may be reduced by such backoff techniques, there may still be considerable power expenditure as the backoff timers may be 'blind' and may not utilize any indication of a user's actual behavior. Furthermore, cell scans may be excessively delayed when a user moves back into cell coverage, in particular if a large backoff timer is started right before a user returns to cell coverage. Users of terminal device **9102** may also manually shut off terminal device **9102** or place terminal device **9102** into airplane mode; however, it is unlikely that a user will be aware of an optimal time to reactivate terminal device **9102.**

In addition to OOC scenarios, in some aspects there may be situations where terminal device **9102** has limited signal coverage from network access node **9110,** such as near the cell edges of coverage area **9500** or in other sections of coverage area **9500** where the radio channel is obstructed or has strong interference. While terminal device **9102** may be able to maintain a connection with network access node **9110** in such low signal scenarios, terminal device **9102** may attempt to perform cell scans (e.g., by the wireless standard as specified by triggering thresholds based on signal strength or quality) in order to search for network access nodes that provide better coverage. Similar to the above case, there may not be any other network access nodes within the detectable range of terminal device **9102;** consequently, any cell scans may not detect any other network access nodes and result in a considerable waste of battery power.

Additionally, in some aspects poor signal conditions may impede data transfer by terminal device **9102.** As radio conditions may be poor, terminal device **9102** may utilize a simple modulation scheme and/or high coding rate, which may result in slow data transfer speeds. Poor radio conditions may also yield significant transmission errors, which may produce a high number of retransmissions. Accordingly, terminal device **9102** may experience high battery drain when attempting data transfer while in low signal conditions (such as at the cell edge of coverage area **9500**).

In recognition of these issues, various aspects may, for example, utilize high-level context information (e.g., obtained at the application layer from a user) of terminal device **9102,** including user/device attribute, time/sensory information, location information, user-generated movement information, detected networks, signal strength/other radio measurements, battery charging, active applications, current data traffic demands and requirements, etc., to, for example, predict travel routes and optimize radio activity along the travel routes. In particular, various aspects may, for example, optimize cell scan timing, data transfer scheduling, and radio access selections based on factors such as predicted routes and corresponding predicted radio conditions. For example, upon detecting an identifiable route that a user is traveling on, terminal device **9102** may anticipate that the user will continue along the route to obtain a predicted route and may subsequently predict radio conditions along the predicted route (e.g., using previously obtained radio measurements along the route and/or crowdsourced information). Terminal device **9102** may then suspend cell scans during OOC or other poor coverage scenarios, schedule data transfer for strong radio conditions, and perform radio access selections of cells, networks, and RATs based on the predicted radio conditions along the predicted route.

In some aspects, terminal device **9102** may also, for example, optimize battery life time based on expected charging times. For example, terminal device **9102** may monitor when power supply **9216** is being charged to identify regular times and/or locations when a user charges terminal device **9102.** Terminal device **9102** may then predict an expected time until next charge and subsequently adjust power consumption at terminal device **9102** (e.g., by entering low power or sleep states) based, for example, on the expected time until next charge. Additionally, terminal device **9102** may, for example, shut down certain tasks and applications at baseband modem **9206** and application processor **9212** in order to conserve power. For example, if battery life at power supply **9216** is low, then baseband modem **9206** can switch to a lower-power RAT (e.g., a RAT that is more power-efficient) and/or may shut down non-critical tasks such as data. In some aspects, the Wi-Fi modem (e.g., integrated as part of baseband modem **9206** or implemented as a separate component) could be completely turned off and only be activated if the user wants to use Wi-Fi. In another example, application processor **9212** could be put in an idle mode (except for monitoring system-critical tasks) and/or suspend background synchronization procedures.

FIG. **96** shows a functional diagram of terminal device **9102** in accordance with some aspects. As shown in FIG. **96,** prediction engine **9600** may include preprocessing module **9602,** local repository **9604,** and local learning module **9606** while decision engine **9610** may include decision module **9612.** As will be described in detail, prediction engine **9600** may receive context information as input, which prediction engine **9600** may, for example, process, store, and evaluate in order to make predictions about expected user behavior including in particular user travel routes. Prediction engine **9600** may also receive input from external learning module **9608,** which may enable prediction engine **9600** to predict user routes and radio conditions based on 'crowdsourced' context information from other terminal devices. Prediction engine **9600** may, for example, provide predicted travel routes and predicted radio conditions to decision engine **9610,** which may render radio activity decisions at decision module **9612** based, for example, on the predicted user routes and/or predicted radio conditions and provide the radio activity instructions to baseband modem **9206** of terminal device **9102** (e.g., to the protocol stack of baseband modem **9206** for execution). The corresponding functionality of the components of prediction engine **9600** and decision engine **9610** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware instructions) stored in a non-transitory computer-readable storage medium, or as a mixed hardware-defined and software-defined module. Accordingly, while the individual components of prediction engine **9600** and decision engine **9610** are depicted separately in FIG. **96,** this depiction serves to highlight the operation of prediction engine **9600** and decision engine **9610** on a functional level; consequently, in some aspects one or more of the components of prediction engine **9600** and decision engine **9610** may be integrated into a common hardware and/or software element. Additionally, the functionality detailed herein (in particular e.g., the formulas/equations, flow charts, and prose descriptions) may be readily incorporated by skilled persons into program code for retrieval from a non-transitory computer readable medium and execution by a processor. In accordance with the configuration of terminal device **9102** depicted in FIG. **92,** prediction engine **9600** and decision engine **9610** may, for example, be implemented as software-defined instructions that are retrieved and executed at application processor **9212** (and/or, e.g., at controller **9210**). Prediction engine **9600** and decision engine **9610** may thus be configured to process and evaluate high-level context information obtained at an application layer of terminal device **9102** and apply the context information to influence radio activity at baseband modem **9206.**

As previously indicated, terminal device **9102** may utilize context information, for example, to control radio activity, and in particular, to evaluate context information to predict user travel routes and radio conditions and to subsequently control radio activity based thereon. As shown in FIG. **96,** prediction engine **9600** may collect a variety of high-level context information, including user/device attributes (e.g., the type of device, including IoT device, smartphone, laptop, tablet, etc.), time/sensory information (e.g., from a clock, accelerometer/gyroscope, etc., which may be sensors **9218** and **9220**), location information (e.g., from a GNSS such as a GPS), user-generated movement information (e.g., planned travel routes from a navigation application (which may be executed at application processor **9212** or in a vehicle/other device connected to terminal device **9102,** such as a vehicular navigation system connected to terminal device **9102** with e.g., Bluetooth), booked hotels/flights/trains from a travel booking application, scheduled calendar events from a calendar application, etc.), detected network information (e.g., network access node or cell ID, network or PLMN ID, battery information (e.g., indicators when power supply **9216** is being charged, current battery power levels, etc.), etc., which may, for example, be provided by baseband modem **9206** and/or the application layer), radio measurements (e.g., signal strength measurements, signal quality measurements, interference measurements, etc., which may, for example, be provided by baseband modem **9206** and/or the application layer), battery charging information (e.g., by monitoring power supply **9216**).

Accordingly, one or more applications executed at application processor **9212** may provide such context information to prediction engine **9600.** Additionally, one or more sensors, such as sensors **9218** and **9220** (e.g., a location sensor and a time sensor), may, in addition to baseband modem **9206,** provide other context information to processing engine **9600** as specified above. Preprocessing module **9602** may receive such context information and interpret and organize the received context information before providing it to local repository **9604** and local learning module **9606.** For example, preprocessing module **9602** may receive incoming context information and prepare the context information in a manner that is consistent for prediction engine **9600** to utilize, e.g., for storage and/or use. This may include discarding data, interpolating data, converting data, or other such operations to arrange the data in a proper format for prediction engine **9600.** Furthermore, in some aspects, preprocessing module **9602** may associate certain context information with other context information during preprocessing, such as detected network information and signal strength measurements associated with a particular location, time, or route, and provide the associated context information to local repository **9604** for storage. In some aspects, preprocessing module **9602** may continually receive context information from the various applications, sensors, location systems, and baseband modem **9206** and may continuously perform the preprocessing before providing the preprocessed context information to local repository **9604** and local learning module **9606.**

As previously detailed, terminal device **9102** may predict user travel routes based on the context information and subsequently apply the predicted user travel routes to optimize radio activity. Terminal device **9102** may be configured to detect when a user is traveling on an identifiable route and subsequently anticipate that the user will continue to follow the identifiable route. For example, in some aspects terminal device **9102** may utilize context information to detect when a user is traveling on a regular route (e.g., a driving route between home and work or another frequently traveled route) or is traveling on a planned route (e.g., traveling to a target destination with a navigation application, on a planned vacation, traveling to a scheduled appointment at a particular location, etc.). After detecting that a user is traveling, for example, on a regular or planned route, terminal device **9102** may predict user behavior, for example, by anticipating that the user will continue along the detected route. In some aspects, terminal device **9102** may utilize probabilistic prediction based on multiple possible routes. In an exemplary scenario, a user may sometimes go directly home after work and other times go to a school to pick up children. Accordingly, terminal device **9102** may be configured to make predictions based on the probability of different possible routes. In some aspects, terminal device **9102** may perform a statistical estimation of which routes a user could take based on a prior probability, and can then update a posterior probability based on observations as the user starts traveling on a particular route.

For example, by monitoring context information such as location information (such as by tracking GPS positions over multiple days/weeks), user-generated movement information (such as by tracking target destinations over multiple days/weeks), time/sensory information (such as by evaluating times/dates when routes are taken), and radio-related context information including detected networks (such as by recognizing certain PLMNs, cells, and RATs that are available on certain routes) of terminal device **9102** over time, local learning module **9606** may 'learn' certain routes that a user frequently uses, such as a route from home to work. As local learning module **9606** may perform such learning based on accumulated past context information, prediction engine **9600** may store previously preprocessed context information in local repository **9604**. Local learning module **9606** may therefore access previously preprocessed context information in order to evaluate the previously preprocessed context information to detect travel patterns and consequently learn regular routes. Local learning module **9606** may therefore generate regular routes based on the previously preprocessed context information and save the regular routes (e.g., defined as a sequence of locations).

Local learning module **9606** may then monitor current and recent (e.g., over the last 5 minutes, over the last 5 miles of travel, etc.) context information provided by preprocessing module **9602** to detect when a user is traveling along a previously learned regular route. For example, local learning module **9606** may compare current/recent location information, time/sensory information, and detected network information to the saved context information of previously learned regular routes to determine whether a user is traveling on a regular route. If the current/recent location information, time/sensory information, and/or detected network information matches the saved context information for a previously learned regular route, local learning module **9606** may determine that a user is traveling along the matched regular route. Local learning module **9606** may then predict user movement by, for example, anticipating that the user will continue moving along the matched regular route. Although in certain cases not as predictive as frequently traveled routes, local learning module **9606** may also compare current and recent context information, especially related to location and time, to context information for known roads such as highways stored at local repository **9604.** If, for example, the current and recent context information matches the context information for a known road, local learning module **9606** may detect that a user is traveling along the road. In particular if the road is e.g., a highway, local learning module **9606** may anticipate that the user will continue along the road for a duration of time and utilize the current road as a regular route. Local learning module **9606** may also classify regular routes such as a home to work route based on which roads are the regular route and later detect that a user is traveling along the regular route by detecting that a user has traveled along the roads of the regular route in sequence.

In addition to detecting when a user is on a regular route, local learning module **9606** may also be configured to detect when a user is traveling on a planned route, such as a route entered into a navigation application, along a route to an appointment scheduled in a calendar application, etc. For example, local learning module **9606** may monitor user-generated movement information provided by preprocessing module **9602** to detect e.g., when a user enters a route into a navigation program, when a user books a vacation/flight/train/bus in a travel application, when a user has a scheduled calendar event or appointment with a specified location, etc. As such user-generated movement information may directly identify a route (or at least a target destination for which a planned route can be identified), local learning module **9606** may utilize such user-generated movement information to identity planned routes and consequently predict user behavior by anticipating that a user will continue along the planned route.

In addition to predicting user movement based on regular and planned routes, prediction engine **9600** may also predict radio conditions along routes in order to ultimately make radio activity decisions (such as suspending cell searches, rescheduling data transfers, making radio access selections, optimizing power consumption levels, etc.). Prediction engine **9600** may therefore also store radio-related context information including previously detected network information and past radio measurements in local repository **9604.** As previously indicated, preprocessing module **9602** may associate such radio-related context information with other context information such as location information, user-generated movement information, and time/sensory information. Accordingly, local repository **9604** may have a record of detected networks (such as which PLMNs are available, which cells are available, which RATs are available) and radio measurements (e.g., signal strength, signal quality, and interference measurements) that match with certain locations, routes, and/or times/dates.

In addition to storing context information explicitly in local repository **9604,** local learning module **9606** may in some aspects also be configured to generate more complex data structures such as Radio Environment Maps (REMs) or other types of radio coverage maps. Such REMs may be map-like data structures that specify radio conditions over a geographic area along with other information such as network and RAT coverage, network access node locations, and other radio-related information. Accordingly, local learning module **9606** may be configured to generate such an REM and utilize the REM in order to predict radio conditions along a particular travel route. For example, upon identifying a predicted route, local learning module **9606** may access the REM stored in local repository **9604** and determine radio coverage along the predicted route in addition to which networks, cells, and RATs are available at various locations along the predicted route.

Local learning module **9606** may utilize radio-related context information observed by terminal device **9102** to generate the REM, including in particular radio measurements at different locations, and may also apply a radio propagation model using such radio measurements to generate a comprehensive coverage map. However, an REM generated with local observations may be useful for routes that a user has previously taken, such as a regular route, the REM may in some cases not be useful in predicting radio conditions for new routes, such as a new planned route detected via user-generated movement information (e.g., by detecting that a user has entered a new route into a navigation program, by identifying an appointment in a calendar application that is in a new location, etc.). Accordingly, in some aspects prediction engine **9600** may rely on crowdsourced information obtained via external learning module **9608,** which may be located external to terminal device **9102** such as a cloud-based server, edge computing server (e.g., a Mobile Edge Computing (MEC) server), a server in the core network, or a component of network access node **9110.** Regardless of deployment specifics, external learning module **9608** may utilize crowdsourced information provided by other terminal devices and provide radio-related context information to prediction engine **9600.** For example, external learning module **9608** may be an edge or cloud server configured to generate REMs and other coverage data based on crowdsourced context information provided by multiple terminal devices. Local learning module **9606** may therefore query external learning module **9608** (e.g., via a software-level connection that relies on the radio access network via network access node **9110** for data transfer) for radio-related context information or predicted radio conditions. For example, local learning module **9606** may identify a new predicted route and may query external learning module **9608** with the new route (or locations proximate to the new route). External learning module **9608** may then respond with radio-related context information and/or predicted radio conditions (which external learning module **9608** may generate with an REM), which local learning module **9606** may utilize to predict radio conditions along the new route. External learning module **9608** may therefore either respond with 'raw' radio-related context information, e.g., by providing radio-related context information along with associated location and/or user-generated movement information, or may perform the radio condition prediction at external learning module **9608** (e.g., with an REM) and respond to local learning module **9606** with predicted radio conditions along the new route.

Local learning module **9606** may continually and/or periodically evaluate context information provided by preprocessing module **9602** in order to learn and update regular routes, to detect when a user is traveling on a regular route or on a planned route, and to predict radio conditions on a particular detected route. As shown in FIG. **96,** local learning module **9606** may provide predicted radio conditions and predicted route information to decision module **9612** of decision engine **9610.** In accordance with some aspects, decision module **9612** may control radio activity such as cell scans, data transfer, and radio access selection based on the predicted radio conditions and predicted route information. As shown in FIG. **96,** decision module **9612** may provide instructions to baseband modem **9206** in order to control radio activity of terminal device **9102.**

FIG. **97** shows an exemplary method **9700,** which decision module **9612** may perform to make radio activity decisions related to cell scan timing based on prediction results provided by prediction engine **9600** in accordance with some aspects. As shown in FIG. **97,** decision module **9612** may first receive predicted radio conditions and predicted route information from prediction engine **9600.** Decision module **9612** may then evaluate the predicted radio conditions and predicted route information in **9704** to determine whether the prediction results indicate that poor radio conditions (e.g., OOC and/or low signal conditions) will be experienced along the predicted route. If decision module **9612** determines that the predicted route will not include poor radio conditions, decision module **9612** may set baseband modem **9206** to a normal operation mode at **9706;** consequently, baseband modem **9206** may continue operating without intervention by decision engine **9610.**

Conversely, if decision module **9612** determines that the predicted route includes poor radio conditions in **9704,** decision module **9612** may proceed to **9708** to monitor the current location of terminal device **9102** in comparison with the expected poor radio condition area. For example, in the setting of FIG. **95,** prediction engine **9600** may identify road **9502** as the predicted route and coverage area **9500** as the predicted radio conditions. Prediction engine **9600** may identify road **9502** as the predicted route by tracking recent location information of terminal device **9102** and matching recent location information with saved location information for a route along road **9502** or by determining that a planned route (e.g., entered at a navigation application) includes road **9502.** Prediction engine **9600** may then predict radio conditions along road **9502,** such as by applying a radio propagation model and/or interpolation scheme to previously obtained radio measurements at various locations along road **9502.**

In various aspects, prediction engine **9600** may apply a prediction algorithm such as a machine learning algorithm to perform route predictions. For example, prediction engine **9600** may apply a Hidden Markov Model (HMM) or Bayesian tree-based algorithm (e.g., executed as instructions at a processor that defines the predictive algorithm). In some aspects, prediction engine **9600** may select the most likely route based on a generic cost function, which may be a simple probability threshold or a weighted sum. As terminal device **9102** traverses a route, prediction engine **9600** may update the probability of the next location and possible radio conditions based on observations (e.g., update the posterior probability) as the possible outcomes become narrower. In some aspects, prediction engine **9600** may utilize a MAP estimate to predict a single route. Additionally or alternatively, in some aspects prediction engine **9600** may utilize a hybrid approach that considers multiple probabilistic outcomes concurrently, and updates the probabilities based on actual observations.

The predicted radio conditions obtained by prediction engine **9600** may indicate that section **9504** has poor radio coverage (due to e.g., previous travel by terminal device **9102** on section **9504** that produced poor radio measurements and/or crowdsourced radio conditions provided by external learning module **9608** that indicate poor radio coverage on section **9504**). Accordingly, decision module **9612** may utilize the predicted radio conditions to identify in **9704** that road **9502** has poor radio conditions at section **9504.** Decision module **9612** may then monitor the current location of terminal device **9102** relative to section **9504** and, upon reaching the beginning of section **9504,** may, e.g., set a backoff timer at baseband modem **9206** for cell scans according to the expected duration of the poor coverage conditions, e.g., the expected amount of time until improved coverage conditions are reached. Decision module **9612** may set the backoff timer based on, e.g., previously observed times that measure the time taken to travel section **9504** and/or current velocity measurements (which may, e.g., be directly available as context information or may be derived from context information, such as by comparing successive locations to estimate current velocity).

Baseband modem **9206** may then set the backoff timer as instructed by decision module **9612** and consequently may suspend cell scans until the backoff timer has expired. Accordingly, instead of triggering cell scans due to poor radio conditions (e.g., in OOC conditions or when a signal strength or signal quality of network access node **9110** falls below a threshold), baseband modem **9206** may not perform any radio scans and may as a result conserve power.

In some aspects, decision module **9612** may continue receiving prediction results from learning engine **9702** and may continually evaluate predicted route information in **9712** to determine if the predicted route has changed. For example, while prediction engine **9600** may anticipate that a user will continue on a regular or planned route, a user may make other decisions that affect the predicted route, such as by stopping a car, taking a detour, being stuck in traffic, speeding up or down; alternatively, prediction engine **9600** may have mistakenly identified another route as a regular route. Decision module **9612** may thus continuously monitor the prediction results in **9712** to identify whether the predicted route has changed. If decision module **9612** determines that the predicted route has changed in **9712,** decision module **9612** may update the expected poor radio condition time in **9714** and re-set the backoff timer at baseband modem **9206** in **9710.**

Decision module **9612** may continue monitoring prediction results and updating the backoff timer if necessary. Eventually, terminal device **9102** may reach the end of section **9504** and thus leave the expected poor radio condition area, which may coincide with the expiry of the backoff timer. Baseband modem **9206** may then switch to normal operation modes in **9716** and restart performing cell scans (e.g., according to cell scan triggering conditions). As opposed to section **9504** in which no cells may be available, baseband modem **9206** may re-detect network access node **9110** within range of terminal device **9102** and may subsequently re-establish a connection with network access node **9110.** In other low signal conditions, such as when terminal device **9102** is at a cell edge and only a single cell is detectable, decision module **9612** may utilize the prediction results to set the backoff timer to coincide with an expected time when terminal device **9102** enters the coverage area of a stronger cell.

In a variation of method **9700,** in some aspects decision module **9612** may instruct baseband modem **9206** to suspend cell scans indefinitely when decision module **9612** determines that terminal device **9102** will begin experiencing poor radio conditions along a predicted route. Decision module **9612** may continually monitor prediction results provided by prediction engine **9600** to track when terminal device **9102** is expected to return to normal radio coverage on the predicted route. When decision module **9612** determines that terminal device **9102** has returned to normal radio coverage (e.g., by comparing a current location of terminal device **9102** to an area expected to have improved radio coverage), decision module **9612** may instruct baseband modem **9206** to resume cell scans. In another modification, in some aspects decision module **9612** may request a single cell scan from baseband modem **9206** when decision module **9612** determines that terminal device **9102** has returned to normal radio coverage and may subsequently check the cell scan results to determine whether terminal device **9102** has actually returned to normal radio coverage. In all such cases, decision module **9612** may control baseband modem **9206** to suspend cell scans until decision module **9612** expects that terminal device **9102** has returned to normal radio coverage.

FIG. **98** shows exemplary results of cell scan optimization in accordance with some aspects. As shown at **9800,** in an exemplary coverage terminal device **9102** may be OOC for a first time period, enter into coverage for a second time period, and return to OOC for a third time period. In the exemplary case **9810** where a terminal device utilizes normal cell scans without a backoff counter, the terminal device may repeatedly perform failed cell scans during the first OOC period, which may waste considerable battery power without successfully detecting any cells. While the exemplary case **9820** where the terminal device employs a backoff counter may reduce the number of failed cell scans during the first OOC period, and as a result reduce the amount of wasted battery power, the use of a backoff counter may result in the terminal device missing an opportunity to successfully detect cells during the second time period.

In contrast to **9810** and **9830,** terminal device **9102** may apply the current aspect in exemplary case **9830** and may detect that an OOC scenario will occur (e.g., based on predicted route information and/or predicted radio conditions) and suspend cell scans until a return to normal coverage is expected. Accordingly, terminal device **9102** may avoid wasting battery power performing failed cell scans during the first OOC period and subsequently predict a return to normal coverage during the second time period. These aspects may therefore be effective in avoiding unnecessary waste of battery power.

As previously indicated, terminal device **9102** may in some aspects also apply the current aspect to control various other radio activities at baseband modem **9206.** For example, decision module **9612** may receive prediction results from prediction engine **9600** that indicate that terminal device **9102** will be in low signal conditions while traveling on a predicted route for an expected duration of time. As such low signal conditions may limit data transfer speeds (e.g., by low modulation schemes, high coding rates, high retransmission rates, etc.), decision module **9612** may decide to adjust data transfer scheduling in accordance with the prediction results. In a scenario where terminal device **9102** is expected to move out of low signal conditions to higher signal conditions at a later point on the predicted route (e.g., according to higher Received Signal Strength Indicator (RSSI) measurements), decision module **9612** may instruct baseband modem **9206** to delay data transfer for the expected duration of time until terminal device **9102** is expected to move into higher signal conditions, thus causing baseband modem **9206** to delay data transfer until terminal device **9102** transitions to the higher signal conditions that may offer higher data transfer speeds and more power-efficient data transfer. In another scenario where terminal device **9102** is expected to move out of low signal conditions to an OOC area along the predicted route, decision module **9612** may instruct baseband modem **9206** to immediately initiate data transfer in low signal conditions to allow for data transfer before coverage ends. Prediction engine **9600** and decision engine **9610** may continue this process along the predicted route by identifying areas that are expected to have strong radio conditions and scheduling data transfer by baseband modem **9206** to occur during the expected strong radio conditions. The ability of baseband modem **9206** to delay data transfer until strong radio conditions are expected may depend on the latency requirements of the data. For example, data with strict latency requirements such as voice traffic may not be able to be delayed while other data with lenient latency requirements such as best-effort packet traffic may be able to be delayed. Consequently, if decision module **9612** instructs baseband modem **9206** to delay and reschedule data transfer for a duration of time until improved radio coverage is expected, baseband modem **9206** may reschedule some data transfer (e.g., for latency-tolerant data) but not for other data (e.g., for latency-critical data). Such smart scheduling of data transfer may dramatically reduce power consumption as data transfer will occur in more efficient conditions. Similarly, prediction engine **9600** may identify that a desired network such as a home Wi-Fi network will soon be available along the predicted route. Depending on the latency-sensitivity of data, decision module **9612** may decide to suspend data transfer until the desired network is available (e.g., in order to reduce cellular data usage).

Additionally or alternatively, in some aspects decision module **9612** may utilize prediction results provided by prediction engine **9600** to make radio access selections including cell, network, and/or RAT selections. For example, prediction engine **9600** may provide a predicted route to decision engine **9610** that is accompanied by a list of cells, networks, and/or RATs that are expected available at specific locations on the predicted route. FIG. **99** shows an exemplary scenario according to some aspects in which different sections of road **9902** may have coverage from network access nodes **9904, 9906, 9908,** and **9910,** where network access nodes **9904-9910** may differ in terms of cell ID optionally in addition to network (e.g., PLMN) and/or RAT (e.g., LTE, UMTS, GSM, etc.). Prediction engine **9600** may identify (e.g., based on previous travel on road **9902** and/or crowdsourced information provided by external learning module **9608)** the sections of road **9902** that are served by each of network access nodes **9904-9910** in addition to the cell ID (e.g., Basic Service Set Identification (BSSID), Physical Cell Identity (PCI), etc.), network ID (e.g., PLMN ID), and RAT provided by each of network access nodes **9904-9910.**

Accordingly, at a subsequent time when terminal device **9102** is traveling on road **9902,** local learning module **9606** may detect road **9902** as a predicted route and provide road **9902** and the associated radio-related context information of network access nodes **9904-9910** to decision module **9612.** Decision module **9612** may then instruct baseband modem **9206** to make radio access selections based on the radio-related context information. For example, decision module **9612** may instruct baseband modem **9206** to make serving cell selections based on the radio-related context information; e.g., by sequentially selecting network access nodes **9904, 9906, 9908,** and **9910** as a serving cell during travel on road **9902.** Accordingly, instead of having to perform full cell scan and measurement procedures, baseband modem **9206** may simplify cell scan and measurement by utilizing the cell IDs, network IDs, and RAT information provided by decision module **9612.**

In many actual use scenarios, there may be multiple network access nodes available at different points along a travel route. Accordingly, in some aspects prediction engine **9600** and decision engine **9610** may identify all network access nodes that are expected to be available at each location and provide the expected network access nodes to baseband modem **9206,** which may then make radio access selections based on expected available network access nodes and their associated network and RAT characteristics. For example, decision engine **9610** may provide baseband modem **9206** with a list of available network access nodes, which may optimize cell search and selection at baseband modem **9206** as baseband modem **9206** may have *a priori* information regarding which network access nodes will be available.

Additionally or alternatively, decision engine **9610** may consider power efficiency properties of multiple RATs supported by baseband modem **9206** in conjunction with the prediction results provided by prediction engine **9600.** For example, baseband modem **9206** may support a first radio access technology and a second radio access technology, where the first radio access technology is more power efficient (e.g., less battery drain) than the second radio access technology. If prediction engine **9600** provides prediction results that indicate that both the first and second radio access technologies will be available in a given area, but that radio conditions for both radio access technologies will be poor, decision module **9612** may select to utilize the first radio access technology, e.g., the more power efficient radio access technology, at baseband modem **9206.** In some aspects, decision module **9612** may select to utilize the first radio access technology over the second radio access technology even if the second radio access technology has a higher priority than the first radio access technology (e.g., in a hierarchical master/slave-RAT system). Furthermore, in some aspects, decision module **9612** may refrain from attempting to connect to other RATs (e.g., may continue to utilize the first radio access technology, e.g., the more power efficient radio access technology) until a stronger coverage area is reached (as indicated by the prediction results). Accordingly, in various aspects decision module **9612** may control RAT selection and switching based on predicted radio coverage and power efficiency characteristics of the RATs supported by baseband modem **9206.**

In addition to making radio access selections based on which network access nodes are expected to be available, in some aspects decision module **9612** may also make selections based on other characteristics of the available network access nodes. For example, prediction engine **9600** may also receive information such as congestion levels, transport layer (e.g., Transport Control Protocol (TCP)) disconnection duration, latency, throughput, Channel Quality Indication (CQI), etc., as radio-related context information (e.g., locally from terminal device **9102** and/or externally as crowdsourced information from external learning module **9608**). Local learning module **9606** may then make predictions about expected congestion, expected transport layer disconnection duration, expected latency, expected CQI, expected throughput, etc., based on previously learned characteristics of the available network access nodes and provide these prediction results to decision module **9612.** Decision module **9612** may then also consider the predicted characteristics of the network access nodes expected to be available on a given route as part of the cell, network, and/or RAT selection process. Decision module **9612** may also make decisions on data transfer scheduling based on the expected congestion, expected transport layer disconnection duration, expected latency, expected CQI, expected throughput, etc., of network access nodes that are expected to be available along a given route. Decision module **9612** may also modify retransmission times at an Internet Protocol (IP) layer as part of radio activity decisions, which may include utilizing predicted congestion and/or latency in order to adjust a TCP/IP timeout timer in order to avoid retransmissions.

As previously introduced, in some aspects terminal device **9102** may implement these aspects on a more fine-grained scale. For example, in addition or alternative to applications related to controlling radio activity during travel on roads or other longer paths (which may be in the order of minutes or hours), terminal device **9102** may control radio activity over much smaller durations of time (e.g., milliseconds or seconds). For example, prediction engine **9600** may monitor radio-related information over a windowed time period (e.g., in the order of seconds or milliseconds) to obtain a historical sequence of radio conditions, which may be a sequence of signal strength measurements, signal quality measurements, or other radio-related context information. Prediction engine **9600** may also obtain other context information, such as one or more of location information, user-generated movement information, or time/sensory information, and utilize the historical sequence of radio conditions along with the other context information (such as current location, accelerometer or gyroscope information, etc.) in order to predict a future sequence of radio conditions (e.g., in the order of milliseconds or seconds in the future). Prediction engine **9600** may then provide the future sequence of radio conditions to decision engine **9610,** which may control radio activity based on the future sequence of radio conditions.

FIG. **100** shows method **10000** of related aspects. As shown in FIG. **100,** prediction engine **9600** may first obtain a historical sequence of radio conditions and other context information in **10010.** In some aspects, the historical sequence of radio conditions may be a past series of radio measurements, such as signal strength or signal quality measurements, while the other context information may be one or more of location information, user-generated movement information, or time/sensory information. For example, in one aspect, the historical sequence of radio measurements may be a sequence of signal strength measurements obtained over a recent period of time, such as several milliseconds or seconds. The other context information may be time/sensory information such as gyroscope or accelerometer movement data that indicates recent movement of terminal device **9102.** Local learning module **9606** of prediction engine **9600** may then apply a predictive algorithm (e.g., as executable instructions) to the historical sequence of radio conditions and the other context information in **10020** to obtain a predicted sequence of radio conditions. For example, local learning module **9606** may utilize the points of the historical sequence of radio conditions (which may each occur at a specific time point in the recent past) to extrapolate the past radio conditions onto a predicted sequence of radio conditions in the future. Local learning module **9606** may also utilize the other context information to shape the predicted sequence of radio conditions. For example, movement of terminal device **9102** as indicated by accelerometer or gyroscope data may indicate the similarity of past radio conditions to future radio conditions, where significant movement of terminal device **9102** may generally reduce the correlation between past and future radio conditions. In some aspects, the predictive algorithm applied by local learning module **9606** may plot a movement trajectory based on the other context information. Accordingly, in various aspects local learning module **9606** may obtain the predicted sequence of radio conditions in **10020** based on the historical sequence of radio conditions and other context information.

Local learning module **9606** may then provide the predicted sequence of radio conditions to decision module **9612** of decision engine **9610.** Decision module **9612** may then control radio activity at baseband modem **9206** based on the predicted sequence of radio conditions in **10030.** In various aspects, this may include controlling cell scans, data transfer, and radio access selection at baseband modem **9206** based on the predicted sequence of radio conditions. For example, if the predicted sequence of radio conditions indicates poor radio conditions (e.g., in the upcoming duration of time characterized by the predicted sequence of radio conditions), decision module **9612** may suspend radio activity, e.g., for a period of time or indefinitely. This may avoid attempting cell scans and data transfer in poor radio conditions, which may yield low cell detection rates and/or low throughput rates. In some aspects, the predicted sequence of radio conditions may indicate radio conditions of multiple RATs, multiple cells, or multiple networks, and accordingly may provide decision module **9612** with a basis to perform radio access selections. For example, if baseband modem **9206** is currently utilizing a first RAT and the predicted sequence of radio conditions indicates that a second RAT is expected to have better radio conditions, decision module **9612** may trigger a RAT switch at baseband modem **9206** from the first RAT to the second RAT. Decision module **9612** may trigger cell and network reselections in the same manner.

As previously indicated, the historical sequence of radio conditions and predicted sequence of radio conditions may in some aspects be centered around near-past and near-present, e.g., in the order of milliseconds or seconds. Accordingly, in some aspects method **10000** may not include route prediction over longer periods of time, and may focus more on control over radio activity in the near future, e.g., over several milliseconds or seconds. In some aspects, this may include triggering relatively instantaneous decisions based on recent radio condition history (e.g., a historical sequence of radio conditions spanning the most recent several milliseconds or seconds) and other context information, in particular related to user movement.

In some aspects, baseband modem **9206** may suspend all modem activity during predicted OOC scenarios. For example, decision module **9612** may identify that a predicted route includes poor coverage conditions and identify a backoff timer according to the expected duration of the poor coverage conditions. In addition to suspending radio scans during the expected duration of the poor coverage conditions, in some aspects baseband modem **9206** may stop all connected mode activity (e.g., connection (re)establishment (e.g., via random access channel (RACH) procedures), connection release, connected mode measurements, data-plane transmit and receive activity, etc.) during the expected duration of poor coverage conditions, e.g., until the backoff timer expires. In some aspects, baseband modem **9206** may also stop all idle mode activity (e.g., cell search as part of cell (re)selection, system information acquisition (e.g., Master Information Block (MIB) and/or System Information Block (SIB, e.g., SIB1)), idle mode measurements, etc.) until the backoff timer expires. Accordingly, in addition to suspending radio scans, baseband modem **9206** may suspend all radio activity (e.g., depending on whether in connected or idle mode) when decision module **9612** determines that poor radio conditions are expected to occur on the predicted route. This may increase power savings at terminal device **9102.** Additionally, in some aspects terminal device **9102** may enter the lowest possible power state (e.g., a sleep state) until the backoff timer expires in order to maximize power consumption.

In some aspects, prediction engine **9600** and decision engine **9610** may also optimize battery power consumption based on predicted battery charging information. For example, prediction engine **9600** may receive battery charging information as context information at preprocessing module **9602,** which may be a simple indicator that power supply **9216** is being charged. Preprocessing module **9602** may then associate a time and location with the charging indicator and provide the associated information to local repository **9604** and local learning module **9606.** Prediction engine **9600** may thus keep a record of past charging locations and times, which may enable local learning module **9606** to learn regular charging locations and times (such as at a home location on evenings). Local learning module **9606** may then be able to anticipate and expected time until next charge based on the regular charging locations and times (relative to a current location and time indicated by current context information) and provide the expected time until next charge to decision module **9612.** Decision module **9612** may then be able to make power control decisions for baseband modem **9206,** such as by instructing baseband modem **9206** to utilize a low power state if the expected time until next charge is a long duration of time. Preprocessing module **9602** may also predict an expected battery power remaining based on current battery power levels and past history of battery power duration and provide such information to decision module **9612.** Decision module **9612** may additionally provide power control instructions to other components of terminal device **9102,** such as to a general power manager (e.g., executed as software-defined instructions at application processor **9212**) in order to control total power consumption at terminal device **9102.**

As indicated above, external learning module **9608** can be located external to terminal device **9102** and may in some aspects be configured to provide prediction results (e.g., based on crowdsourced context information from other terminal devices) to prediction engine **9600.** Accordingly, some of the processing load can be offloaded to external learning module **9608.** In a variation, some or all of the processing load at local learning module **9606** in addition to storage of context information at local repository **9604** may be offloaded to external learning module **9608,** such as in a cloud-processing setup. Accordingly, as opposed to performing prediction processing and/or storage at prediction engine **9600,** prediction engine **9600** may provide context information (raw or preprocessed) to external learning module **9608,** which may then perform prediction processing (e.g., in the manner as detailed above regarding local learning module **9606;** potentially using more crowdsourced context information) and provide prediction results to decision module **9612.** Decision module **9612** may then render decisions using the prediction results in the manner detailed above.

Terminal devices may therefore apply various aspects to use high-level context information to optimize radio activity and other operations such as battery power. In particular, terminal devices may render predictions related to both expected user movement (e.g., regular or planned routes) and radio conditions (e.g., radio conditions and available cells/networks/RATs) to optimize radio activity along expected user movement paths, including suspending cell scans and data transfers and making cell/network/RAT selections. Additionally, terminal devices may predict battery charging scenarios and optimize power consumption based on the expected time until the next charge.

FIG. **101** shows exemplary method **10100** of performing radio communications in accordance with some aspects. As shown in FIG. **101,** method **10100** includes determining a predicted user movement based on context information related to a user location to obtain a predicted route (**10110**), determining predicted radio conditions along the predicted route (**10120**), based on the predicted radio conditions, identifying one or more first areas expected to have a first type of radio conditions and one or more second areas expected to have a second type of radio conditions different from the first type of radio conditions (**10130**), and controlling radio activity while traveling on the predicted route according to the one or more first areas and the one or more second areas (**10140**).

3.2 Context-Awareness #2

Certain aspects described above may thus yield considerable benefits locally at terminal devices. However, optimization based on context awareness may also produce significant advantages on the network side, in particular at network access nodes to optimize network activity. In particular, knowledge of expected user travel routes may enable network access nodes to optimize a variety of parameters such as spectrum and resource allocation, cell loading, Quality of Service (QoS), handovers and other device mobility, etc. Accordingly, in some aspects of this disclosure, terminal devices and network access nodes may cooperate to provide user travel and usage predictions for a number of terminal devices to the network. Network access nodes may then be able to utilize the user travel predictions to optimize service across numerous users. Coordination between multiple terminal devices and network access nodes may additionally facilitate crowdsourcing of data across many devices and enhance prediction accuracy and applicability.

Some aspects of this disclosure may therefore include prediction and decision engines at both terminal devices and network access nodes. The terminal device and network access node prediction engines may interface with each other (e.g., via a software-level connection relying on a radio connection for low-layer transport) in order to share context information and make overall predictions based on the shared prediction information, which may allow one or both sides to enhance prediction results based on information or predictions of the other side. For example, in some aspects multiple terminal devices may each predict user movement using context information at a local terminal device (TD) prediction engine, such as by detecting travel on regular or planned routes as described above. Terminal devices may also be able to predict data transfer-related parameters such as expected traffic demands, expected QoS requirements, expected active applications (which may impact traffic demands and QoS requirements), etc., which may provide a characterization of the data transfer requirements of each terminal device. The terminal devices may then provide the movement and data requirement predictions to a counterpart network access node (NAN) prediction engine, which may then be able to utilize the movement and data requirement predictions from the terminal devices in order to anticipate where each terminal devices will be located and what the data requirements will be for each terminal device. The BS prediction engine may therefore be able to predict network conditions such as expected network traffic, expected load, expected congestion, expected latency, expected spectrum usage, and expected traffic types based on the predicted routes and predicted data requirements of each terminal device. The TD and NAN prediction engines may then provide terminal device and network predictions to TD and NAN decision engines, which may then make optimization decisions for the terminal devices and network access nodes based on the predictions generated by the TD and NAN prediction engines. For example, the NAN decision engine may use the prediction results to optimize spectrum and resource allocation, optimize scheduling and offloading, perform smart handovers and network switching of terminal devices, and arrange for variable spectrum pricing and leasing. The TD decision engines at each terminal device may use the prediction results to optimize cell scan timing, optimize service and power levels, perform smart download/data transfer scheduling, make decisions on flexible pricing schemes, adjust travel or navigation routes based on predicted radio coverage and service, or negotiate with networks or other terminal devices or users of terminal devices for resources and timing of resource availability.

FIG. **102** shows an exemplary arrangement of the TD and NAN prediction and decision engines according to some aspects, which may be logically grouped into prediction module **10200** comprising local NAN prediction module **10202** and local TD prediction module **10204** and decision module **10210** comprising local NAN decision module **10212** and local TD decision module **10214.** The implementation of prediction module **10200** and decision module **10210** may be a 'logical' arrangement; accordingly, local TD prediction module **10204** and local TD decision module **10214** may be located at a terminal device, such as terminal device **9102,** while local NAN prediction module **10202** and local NAN decision module **10212** may be located at a network access node, such as network access node **9110.** For example, in some aspects local TD prediction module **10204** and local TD decision module **10214** may be implemented as software-defined instructions executed at application processor **9212** of terminal device **9102** while local NAN prediction module **10202** and local NAN decision module **10212** may be implemented as software-defined instructions executed at control module **9310** of network access node **9110.** Local NAN prediction module **10204** may have a software-level connection with local TD prediction module **10204** (which may rely on a radio access connection between terminal device **9102** and network access node **9110** for lower-layer transport) to form prediction module **10200.** Similarly, local NAN decision module **10212** may have a software-level connection with local TD decision module **10214** (which may rely on a radio access connection between terminal device **9102** and network access node **9110** for lower-layer transport) to form decision module **10210.** In some aspects, one or more of local TD prediction module **10204,** local TD decision module **10214,** local NAN prediction module **10202** and local NAN decision module **10212** may be implemented in a hardware-defined manner, such as with one or more dedicated hardware circuits, which may be completely hardware or a mixture of software and hardware (e.g., a processor that can offload certain tasks to hardware accelerators or other dedicated hardware circuits).

Furthermore, one or more additional terminal devices (denoted as TD_1 - TD_N in FIG. **102**) may each include a local TD prediction module and local TD decision module as part of prediction module **10200** and decision module **10210.** Additionally, prediction module **10200** and decision module **10200** may include local NAN prediction modules and local NAN decision modules from one or more additional network access nodes. The incorporation of additional terminal devices and network access nodes may expand the prediction results, e.g., to include predictions from numerous different terminal devices and base stations, and expand the decision making, e.g., to make decisions at numerous different terminal devices and base stations. Prediction module **9300** may also receive context information from core network components, such as Mobility Management Entities (MMEs), Home Subscriber Services (HSSs), etc., which may also relate to traffic loading, congestion, latency, network traffic, spectrum usage, offloading info., loading variations, delay, QoS, throughput, and traffic types and be utilized by prediction module **10200** to make predictions. Additionally, while local NAN prediction module **10202** and local NAN decision module **10212** are detailed above as being implemented at a network access node, local NAN prediction module **10202** and local NAN decision module **10212** may alternatively be implemented as part of the core network, such as at a core network location that interfaces with multiple network access nodes and thus has access to context information from the multiple network access nodes. Also, prediction module **10200** and decision module **10210** may include respectively include core network prediction modules and core network decision modules located in the core network that interface with the other prediction and decision modules of prediction module **10200** and decision module **10210.** Accordingly, prediction module **10200** and decision module **10210** may therefore be implemented in a distributed manner between terminal device **9102,** network access node **9110,** one or more other terminal devices, one or more other network access nodes, and one or more other core network components. Prediction module **10200** and decision module **10210** may therefore be compatible with numerous different physical placements of local NAN prediction module **10202,** local TD prediction module **10204,** local NAN decision module **10212,** and local TD decision module **10214.**

FIGs. **103** and **104** show exemplary configurations of local TD prediction module **10204,** local TD decision module **10214,** local NAN prediction module **10202,** and local NAN decision module **10212** according to some aspects. FIG. **105** shows message sequence chart **10500,** which details the operations of local TD prediction module **10204,** local TD decision module **10214,** local NAN prediction module **10202** in accordance with some aspects. As will be detailed, local NAN prediction module **10202** and local TD prediction module **10204** may make local predictions based on local context information (**10502a** and **10502b**) and coordinate prediction results with each other in order to refine the prediction results (**10504**). Local NAN prediction module **10202** and local TD prediction module **10204** may then provide the prediction results to local NAN decision module **10212** and local TD decision module **10214** (**10506a** and **10506b**), which may then coordinate decisions (**10508**) and render final decisions at terminal device **9102** and network access node **9110** (**10510a** and **10510b)**

As shown in FIGs. **103** and **104,** local TD prediction module **10204,** local TD decision module **10214,** local NAN prediction module **10202,** and local NAN decision module **10212** may in some aspects be configured in a similar manner as prediction engine **9600** and decision engine **9610** as described above. Accordingly, local TD prediction module **10204** may receive local TD context information in **10502a,** including user/device attributes, time/sensory information, location information, user-generated movement information, detected networks, signal strength/other radio measurements, battery charging information, active applications, and current data traffic demands and requirements. Preprocessing module **10302** may then preprocess the received context information, such as to associate certain types of context information with other related context information, and provide the preprocessed context information to local repository **10304** for storage and to local learning module **10306** for learning and prediction. Local learning module **10306** may then evaluate current context information (received from preprocessing module **10302**) and past context information (received from local repository **10304**) in order to predict user movement, radio conditions, and data service requirements (thus obtaining the local predictions in **10502a**). In particular, local learning module **10306** may evaluate the context information to detect when a user is traveling on an identifiable route, such as a regular route or a planned route, and predict user movement by anticipating that the user will continue to travel on the detected route. After predicting user movement, local learning module **10306** may predict radio conditions along the predicted route, which may include predicting radio coverage conditions in addition to predicting which networks, cells, and RATs will be available along the predicted route. Local learning module **10306** may perform the route and radio condition prediction in the same manner as detailed above regarding local learning module **10500.**

Local learning module **10306** may also predict upcoming data service requirements as part of **10502a,** which may include predicting expected traffic demands, expected QoS requirements, and expected active applications (which may impact traffic demands and QoS requirements depending on the data traffic of the active applications). In particular, local learning module **10306** may evaluate context information related to active applications and current data traffic demands and requirements to predict upcoming data service requirements. For example, local learning module **10306** may identify which applications are currently active at terminal device **9102** and evaluate the data traffic requirements of the active applications, such as the throughput demands, QoS demands, data speed demands, reliability demands, etc., of the active applications. Additionally, if, for example, local learning module **10306** identifies that terminal device **9102** is on a regular route, local learning module **10306** may access local repository **10304** to identify whether any particular applications are normally used on the regular route (such as a streaming music player application on a regular driving route), which preprocessing module **10402** may have previously associated with locations on the regular route during earlier preprocessing and stored in local repository **10304.** Additionally, local learning module **10306** may look at current and recent data traffic demands and requirements at terminal device **9102,** including overall throughput demands, QoS demands, data speed demands, and reliability demands. Local learning module **10306** may then be able to predict what the upcoming data service requirements will be based on the current and recent data traffic demands and requirements.

For example, in some aspects local learning module **10306** may predict a congestion level of a network access node as part of the predicted radio conditions. Local learning module **10306** may apply a predefined prediction function with input variables derived from context information in order to produce the congestion level. For example, local learning module **10306** may calculate $CL_p = F(Nw, t, Loc)$, where $CL_p$ is the predicted congestion level, *Nw* is the radio access network type (e.g., cellular or Wi-Fi) and network access node identifier (e.g., by BSSID or AP ID), *t* is the time, and *Loc* is the location. The prediction function *F* may be a simple linear function of its input parameters or may be a complicated learning function such as a Support Vector Machine (SVM) or Bayes network derived from a learning algorithm. Each local learning module may apply such algorithms and prediction functions in order to obtain the respective prediction results.

Local NAN prediction module **10202** may also obtain local predictions in **10502b.** As shown in FIG. **104,** local NAN prediction module **10204** may receive local context information for network access node **9110,** which may include context information from network access node **9110** in addition to core network context information (e.g., from an MME or HSS). Such context information can include, without limitation, traffic loading information, congestion information, latency information, network traffic information, spectrum usage information, offloading information, loading variation information, delay information, QoS information, throughput information, and traffic type information. Preprocessing module **10402** may then preprocess the context information and provide the preprocessed context information to local repository **10404** and local learning module **10406.** Local learning module **10406** may evaluate current context information (received from preprocessing module **10402**) and recent context information (received from local repository **10404**) to make predictions regarding network conditions, including expected network traffic, expected network load, expected congestion, expected latency, expected spectrum usage, and expected traffic types. For example, in some aspects local learning module **10406** may evaluate context information over a recent window of time in order to average context information and determine expected network conditions. Local learning module **10406** may additionally utilize more complex prediction techniques to extrapolate current and recent context information to predict upcoming network conditions.

Local TD prediction module **10204** and local NAN prediction module **10202** may therefore obtain local prediction results in **10502a** and **10502b,** where local TD prediction module **10204** may, for example, obtain predicted route, predicted data service requirements, and predicted radio conditions and local NAN prediction module **10202** may, for example, obtain predicted network conditions. As prediction results at local TD prediction module **10204** may be highly relevant to the prediction results at local NAN prediction module **10202** (and vice versa), local TD prediction module **10204** and local NAN prediction module **10202** may coordinate prediction results in **10504** (as also shown in FIG. **102** in prediction module **10200**) in some aspects. Additionally, in some aspects one or more other prediction modules may be part of prediction module **10200,** such as one or more other UE prediction modules and one or more core network prediction modules, the other prediction modules may also coordinate prediction results with local TD prediction module **10204** and local NAN prediction module **10202** (e.g., with an REM or similar coverage map). Accordingly, as shown in FIG. **103,** local TD prediction module **10202** may receive prediction results from one or more other predictions modules (including local NAN prediction module **10204**) as external prediction module **10308** while local NAN prediction module **10204** may receive prediction results from one or more other prediction modules (including local TD prediction module **10202**) as external prediction module **10408.**

In some aspects, local TD prediction module **10204** and local NAN prediction module **10202** may then update local prediction results based on the external prediction results in **10504.** For example, local learning module **10306** may utilize context information and prediction results from other UE prediction modules as 'crowdsourced' information (e.g., in the manner detailed above regarding external learning module **9608,** potentially with an REM or similar procedure), which may enable local TD prediction module **10204** to obtain context information related to new locations and routes (such as radio condition and network selection information for a new route). Additionally, in some aspects the local TD prediction results from terminal device **9102** and one or more other terminal devices may have a significant impact on the local NAN prediction results. For example, multiple TD prediction modules of external prediction modules **10408** may each be able to provide a predicted route and predicted data service requirements along the predicted route to local learning module **10406.** Based on the predicted routes and predicted data service requirements, local learning module **10406** may more accurately predict, for example, expected network traffic, expected network load, expected congestion, expected latency, expected spectrum usage, and expected traffic types as local learning module **10406** may have predictive information that anticipates the number of served terminal devices (e.g., based on which terminal devices have predicted routes that fall within the coverage area of network access node **9110)** and the data service requirements of each terminal device. Local learning module **10406** may update and/or recalculate the predicted network conditions using the external prediction results from external prediction modules **10408.**

After coordinating prediction results in **10504,** prediction module **10200** may have a comprehensive set of prediction results, included predicted routes, predicted data service requirements, predicted radio conditions, and/or predicted network conditions. Prediction module **10200** may then provide the comprehensive prediction results to decision module **10210** at local TD decision module **10214** and local NAN decision module **10212** in **10506a** and **10506b.**

Local TD decision module **10214** and local NAN decision module **10212** may then be able optimize terminal device and network decisions based on the comprehensive prediction results. As network decisions (such as spectrum/resource allocations, scheduling, handovers, spectrum pricing/leasing) may have an impact on terminal device activity and terminal device decisions (such as service levels, scheduling, pricing schemes, radio access selection, radio activity, power states, and routes) may have an impact on network activity, local TD decision module **10214** and local NAN decision module **10212** may coordinate in **10508** in order to make decisions. For example, local NAN decision module **10212** may utilize the predicted network conditions obtained based on predicted data service requirements and predicted routes to perform spectrum allocation for multiple terminal devices including terminal device **9102,** such as by assigning terminal device **9102** to operate on a specific band. The spectrum allocation may have a direct impact on the radio conditions, data service, and network conditions experienced by terminal device **9102,** which may be traveling along a predicted route that is served in part by network access node **9110.** Accordingly, if local NAN decision module **10212** decides on a spectrum allocation that is unsatisfactory to terminal device **9102,** local TD decision module **10214** may decide to select a different network access node along the predicted route, which may in turn affect the data traffic requirements of network access node **9110.** Due to the interconnectedness between terminal device and network decisions, decision coordination in **10508** may be important to provide for maximum optimization of terminal device and network activity. Numerous other network decisions can be applied, such as moving mobile network access nodes (e.g., drones or other vehicular network access nodes) to areas of higher expected demand. Local TD decision module **10214** and local NAN decision module **10212** may also make decisions regarding offloading, such as by triggering offloading from the network side based on expected demand. In some aspects, local TD decision module **10214** and local NAN decision module **10212** may adjust the use of unlicensed spectrum and relaying based on expected demand in certain areas. In some aspects, local TD decision module **10214** and local NAN decision module **10212** can also adjust cell sizes of network access nodes, such as switching between macro and micro cell sizes. In some aspects, these decisions may be handled at local NAN decision module **10212,** while in other aspects these decisions may be performed as a cooperative process between local TD decision module **10214** and local NAN decision module **10212.**

Local TD decision module **10214** and local NAN decision module **10212** may utilize the prediction results (e.g., predicted routes, predicted data service requirements, predicted radio conditions, and/or predicted network conditions) to make any of a number of different terminal device and network decisions. For example, local NAN decision module **10212** may make decisions on a variety of communication activities such as spectrum allocation (e.g., assigning terminal devices to specific bands), resource allocation (e.g., assigning radio resources to terminal devices), scheduling/offloading, handovers/switching, variable spectrum pricing (e.g., offering flexible pricing if when network loading is expected to be high), or spectrum leasing (e.g., leasing additional spectrum when predicted demand is high) based on the prediction results. In particular, local NAN decision module **10212** may utilize the predicted routes, predicted data service requirements, and/or predicted radio conditions (e.g., as a REM) for multiple terminal devices to plan spectrum and resource allocations and/or coordinate handovers as the terminal devices move along the predicted routes.

In some aspects, local TD decision module **10214** may perform cell scan timing (e.g., as described above), schedule other modem activity (e.g., by suspending connected and/or idle mode modem activity as described above), optimize service and power levels (e.g., by selecting optimized power states, entering low power states during poor coverage conditions, etc., e.g., as described above), perform scheduling for downloads and data transfers (e.g., as described above), make decisions on flexible pricing schemes (e.g., decide on flexible pricing based on predicted coverage and predicted data service requirements), and/or change navigation routes in a navigation program (e.g., based on predicted radio conditions and coverage). As local TD decision module **10214** may have both predicted radio conditions and predicted network conditions, local TD decision module **10214** may be configured to select network access nodes that have strong predicted radio conditions and strong predicted network conditions, such as a network access node that has one or more of strong signal strength, strong signal quality, low interference, low latency, low congestion, low transport layer disconnection duration, low load, etc., according to the predicted radio conditions and/or predicted network conditions. Additionally, in some aspects local TD decision module **10214** may be configured to schedule data transfer when predicted radio conditions and predicted network conditions indicate one or more of strong signal strength, strong signal quality, low interference, low latency, low congestion, low transport layer disconnection duration, low load, etc., along the predicted route.

FIG. **106** shows method **10600,** which illustrates an exemplary procedure in which local NAN decision module **10212** may make a spectrum allocation decision based on the prediction results according to some aspects. Different terminal devices may support different spectrum (e.g., different bands) and different levels of service (e.g., different RATs, which may be indicated as user/device attribute context information). Each terminal device may attempt to find and remain on the highest level of service/most effective RAT, e.g., from 4G to 3G to 2G. However, spectrum may become congested due to high demand; accordingly, it may be advantageous for the network (e.g., network access nodes) to predict when and where network congestion may occur in order to enable the network to ensure that all users obtain service that meets their expected QoS. If there is not sufficient spectrum, the network operator may attempt to lease new spectrum from various entities, such as in accordance with a Licensed Shared Access (LSA) or Spectrum Access System (SAS), and/or may intelligently allocate spectrum to different terminal devices to ensure that all terminal devices have sufficient spectrum. Accordingly, if the network can predict the network load in advance, the network can allocate the frequencies in an efficient manner, which may reduce switching and thus avoid both wasting energy and reducing QoS.

Accordingly, in some aspects local NAN decision module **10212** may implement method **10600** to perform spectrum allocation based on predicted routes and data service requirements of various terminal devices. As shown in FIG. **106,** local NAN decision module **10212** may obtain TD prediction results in **10602** including predicted routes and predicted data service requirements in addition to the bands supported by each terminal device. Local NAN decision module **10212** may then determine in **10604** whether sufficient spectrum will be (is expected to be) available based on the predicted routes and predicted data service requirements. If sufficient spectrum is expected to be available in **10604,** local NAN decision module **10212** may not need to lease any addition spectrum and may proceed to **10606** to allocate spectrum to users while ensuring that terminal devices with limited band support have sufficient spectrum.

Conversely, is sufficient spectrum is not expected to be available in **10604,** local NAN decision module **10212** may determine in **10608** if it is possible to lease new spectrum, such as part of an LSA or SAS scheme. If it is not possible to lease new spectrum, local NAN decision module **10610** may offer tiered pricing to higher-paying customers to ensure that higher paying customers receive a high quality of service. If it is possible to lease new spectrum, local NAN decision module **10212** may lease spectrum to offset demand **10614,** where the total amount of leased spectrum and duration of the lease may depend on the predicted network load. Following **10610** or **10614,** may proceed to **10606** to allocate spectrum to users while ensuring that terminal devices with limited band support have sufficient spectrum. Local NAN decision module **10212** may continue to use the leased spectrum or tiered pricing until peak demand subsides, at which point local NAN decision module **10212** may release the leased spectrum or tiered pricing in **10616.**

In various aspects, local TD decision module **10214** may perform a variety of different optimizing decisions to control radio activity in **10510a.** For example, local TD decision module **10214** may utilize its predicted route along with predicted radio conditions (e.g., as a REM) to schedule delay-tolerant data for strong radio coverage areas along the predicted route, to select a desired network type to utilize based on predicted available networks along the predicted route, to scan for certain network access nodes based on predicted available network access nodes along the predicted route, to make decisions on flexible pricing schemes, to change routes on a navigation application (e.g., to select a new route with better radio conditions than a current route), to perform IP layer optimization (such as optimizing retransmissions and acknowledgements/non-acknowledgements (ACK/NACKs)), to suspend cell scans, to suspend modem activity, to select optimized power states, etc.

In accordance with various aspects, local TD decision module **10214** and local NAN decision module **10212** may therefore render local TD decisions and local NAN decision at **10510a** and **10510b** and provide the decision instructions to baseband modem **9206** (e.g., to the terminal device protocol stack) or application processor **9212** and control module **9310** (e.g., to the network access node protocol stack), respectively, which may carry out the decisions as instructed. Such may include transmitting or receiving data in accordance with the decisions.

As previously indicated, in some aspects prediction module **10200** may also include a core network prediction module, and decision module **10210** may also include a core network decision module. Accordingly, as opposed to network prediction and decisions on a network access node level, the core network prediction module and core network decision module may be able to make predictions and decisions for multiple network access nodes. Accordingly, as opposed to only making predictions and decisions based on the terminal devices served by a single network access node, the core network prediction module and core network decision module may be able to evaluate terminal devices connected to multiple network access nodes (and accordingly evaluate terminal device prediction results including predicted routes and predicted data service requirements over the coverage area of multiple network access nodes). Accordingly, the core network prediction module may predict a sequence of serving network access nodes that each terminal device is expected to utilize over time and execute decisions to control each of the network access nodes based on the predicted routes and predicted data service requirements of each terminal device, such as planning the handovers for each terminal device, planning the spectrum/resource allocations needed at each network access node at each time, etc. For example, in some aspects the core network prediction module and core network decision module could plan optimizations across the coverage areas of multiple network access nodes, such as if a terminal device is at the cell edge of e.g., two or three network access nodes. Due to signal variations, there could be a cycle of handoffs where the terminal device transfers repeatedly between the network access nodes. This may consume power and resources. However, the core network prediction module may know obtain the context information for the terminal device. Accordingly, in scenarios where the terminal device is static (as indicated by the context information and detected by the core network prediction module) or has other predictable movement around the cell edge, the core network prediction module and core network decision module can coordinate amongst the network access nodes (via the logical connections of prediction module **10200** and/or decision module **10210**) to decide which base station the terminal device should connect to.

Furthermore, in some aspects prediction module **10200** and decision module **10210** may be implemented in a 'distributed' manner, where local NAN prediction module **10202,** local TD prediction module **10204,** local NAN decision module **10212,** local TD decision module **10214,** one or more other terminal device prediction and decision modules, one or more other network access node prediction and decision modules, and one or more other core network prediction and decision modules are physically located at different locations and may form prediction module **10200** and decision module **10210** via software-level connections. As shown in FIG. **107,** in some aspects this 'distributed' architecture can be further expanded to a cloud-based architecture where terminal device and network access node prediction and decisions may be partially or fully implemented at cloud infrastructure **10700.** Cloud infrastructure **10700** may therefore be a server comprising cloud NAN prediction module **10202b,** cloud TD prediction module **10204b,** cloud NAN decision module **10212a,** and cloud TD decision module **10214a,** which may each be software-defined instructions executed at cloud infrastructure **10700.**

Accordingly, in various aspects local NAN prediction module **10202a** may perform part of the network access node prediction at network access node **9110** while cloud NAN prediction module **10202b** may perform the rest of the network access node prediction at cloud infrastructure **10700,** local TD prediction module **10204a** may perform part of the terminal device prediction at terminal device **9102** while cloud TD prediction module **10204b** may perform the rest of the terminal device prediction at cloud infrastructure **10700,** cloud NAN decision module **10212a** may perform part of the network access node decision at cloud infrastructure **10700** while local NAN decision module **10212b** may perform the rest of the network access node decision at network access node **9110,** and cloud TD decision module **10214a** may perform part of the terminal device decision at cloud infrastructure **10700** while local TD decision module **10214b** may perform the rest of the terminal device decision at terminal device **9102.** While the cloud-based architecture of FIG. **107** may be able to provide equivalent functionality to the distributed architecture of FIG. **102,** the cloud-based architecture may substantially reduce computational and storage load at terminal devices. Accordingly, as opposed to completely performing the terminal device prediction and decision locally at terminal device **9102,** cloud infrastructure **10700** may handle the terminal device prediction and decision at cloud TD prediction module **10204b** and cloud TD E decision module **10214b.** Although network access nodes may generally not be as constricted by computation and storage considerations, cloud infrastructure **10700** may also offload network access node prediction and decision from network access node **9110.**

FIG. **108** further illustrates the cloud-based architecture in accordance with some aspects. As shown in FIG. **108,** local NAN prediction module **10202a** and local TD prediction module **10204a** may be configured in a similar manner as local NAN prediction module **10202** and local TD prediction module **10204.** However, instead of performing all storage and learning locally, local NAN prediction module **10202a** and local TD prediction module **10204a** may rely on cloud repository **10702** and cloud learning module **10704** (which may collectively comprise cloud NAN prediction module **10202b** and cloud TD prediction module **10204b**) to perform storage of context information and prediction results (cloud repository **10702**) and to perform learning processing (e.g., cloud learning module **10704**). Accordingly, the processing and storage burdens at network access node **9110** and terminal device **9102** may be reduced. Similarly, local NAN decision module **10212a** and local TD decision module **10214a** may offload decision processing to cloud decision module **10706** (which may comprise cloud NAN decision module **10212b** and cloud TD decision module **10214b**). Local NAN decision module **10212a** and local TD decision module **10214a** may then issue decision instructions to control module **9310** and baseband modem **9206.**

The cloud-based architecture of FIGs. **107** and **108** may additionally facilitate easier crowdsourcing, such as for crowdsourcing terminal device context information and prediction results. Accordingly, instead of relying on connections between terminal devices (e.g., between local TD prediction modules of terminal devices), each local TD prediction module may maintain a software-level connection with cloud infrastructure **10700,** which may maintain crowdsourced information at cloud repository **10702,** and may retrieve data including both context information and prediction results from cloud repository **10702** on request. Local NAN prediction module **10202a** may similarly maintain a software-level connection with cloud repository **10702** and thus may have access to context information and prediction results provided by terminal devices to cloud repository **10702**; likewise, the local TD prediction module of each terminal device may have access to context information and prediction results provided by network access node **9110** (and one or more other network access nodes).

Cloud learning module **10704** may be configured to perform learning processing, in particular with the context information and prediction results stored in cloud repository **10702.** As cloud learning module **10704** may have access to a substantial amount of data at a central location, prediction coordination in **10504** of message sequence chart **10500** may be simplified. Similarly, cloud decision module **10706** may have access to prediction results from cloud learning module **10704,** which may apply to each terminal device and base station connected to cloud infrastructure **10700.** Cloud decision module **10706** may thus perform decision coordination in **10508** of message sequence chart **10500** and provide decision results to local NAN decision module **10212a** and local TD decision module **10214a,** which may have control over final decisions.

For example, cloud learning module **10704** may be configured to generate radio coverage maps such as REMs using the context information and prediction results provided by each participating terminal device and network access node. Cloud learning module **10704** may then be configured to store the radio coverage maps in cloud repository **10702,** which cloud decision module **10706** may access for later decisions. For example, cloud learning module **10704** may receive predicted routes from one or more terminal devices and apply the radio coverage map to the predicted routes in order to predict radio conditions and network conditions for each terminal device based on the radio coverage map. Cloud decision module **10706** may then make radio activity decisions, such as cell scan timing, data transfer scheduling, radio access selections, etc., for the terminal devices based on the radio coverage map.

In some aspects, the participating terminal devices and base stations may utilize a preconfigured interface to exchange data with cloud infrastructure **10700,** such as with a 'request/response' configuration. Accordingly, different types of messages can be predefined and used to store and retrieve information from cloud infrastructure **10700** by each terminal device and network access node. FIG. **109** illustrates exemplary message formats to support such an interface in accordance with some aspects. As shown in FIG. **109,** a client device such as a terminal device or network access node (e.g., a local TD prediction module or a local NAN prediction module with a software-level connection to cloud infrastructure **10700**) may utilize upload message **10902** to upload data to the cloud by addressing the message with an identifier of the device and including various different data information fields, which may include any type of context information and/or stored prediction result. Cloud infrastructure **10700** may receive multiple upload messages **10900** and store the contained data in cloud repository **10702.** Client devices may then request data with request message **10904,** which may request that cloud infrastructure **10700** respond with a certain type of requested data. Cloud infrastructure **10700** may respond with response message **10906,** which may include the requested data. For example, a terminal device may request a list of network access nodes (e.g., BSSIDs) along a predicted route, radio measurements (e.g., RSSI measurements) for certain network access nodes, etc., with request message **10904,** which cloud infrastructure **10700** may receive from cloud repository **10702** (which may come from crowdsourced information) and provide to the requesting terminal device with response message **10906.** Conversely, cloud infrastructure **10700** may request specific data from a client device with request message **10904,** which the client device may respond to with response message **10906.**

Additionally, in some aspects a client device may be able to request for cloud infrastructure **10700** to perform predictions with prediction request message **10908,** which may specify a type of prediction (e.g., route prediction, radio condition prediction, etc.) in addition to data related the prediction (e.g., location information such as current and recent locations with timestamps). For example, terminal device **9102** may obtain a series of timestamped locations at preprocessing module **10302** and may wish to detect whether terminal device **9102** is on an identifiable route, such as a regular route. Local TD prediction module **10204** may then transmit prediction request message **10908** with the timestamped locations to cloud infrastructure **10700.** Cloud infrastructure **10700** may receive and process prediction request message **10908** at cloud learning module **10704,** which may include comparing the timestamped locations to information stored in cloud repository **10702** (e.g., either previous locations of terminal device **9102** in order to recognize a regular route or to known roads in order to identify a road that terminal device **9102** is traveling on). Cloud learning module **10704** may then predict the route of terminal device **9102** and respond to terminal device **9102** with prediction response message **10910,** which may provide a series of predicted timestamped locations that identify the predicted route. Cloud learning module **10704** may also provide predicted radio conditions to terminal device **9102** that predict radio conditions along the predicted route, which cloud learning module **10704** may generate based on an REM or other radio coverage map stored in cloud repository **10702.** Local TD decision module **10312** may then make radio activity decisions and instruct baseband modem **9206** accordingly, such as to schedule data transfers, control cell scan timing, make radio access selections, etc.

The distributed architecture of these aspects may therefore enable a high level of coordination between terminal devices, base stations, and the core network and accordingly may provide highly accurate predictions on both the terminal device and network side. Additionally, these aspects may be very compatible with cloud-based architectures that may reduce storage and processing burdens on terminal devices and network access nodes in addition to readily facilitating crowdsourcing.

FIG. **110** shows exemplary method **11000** of performing radio communications in accordance with some aspects. As shown in FIG. **110,** method **11000** includes determining a predicted user movement based on context information related to a user location to obtain a predicted route (**11010**), determining the predicted radio conditions along the predicted route (**11020**), reporting the predicted route to a network access node and receiving predicted network conditions from the network access node (**11030**), and controlling radio activity while traveling on the predicted route based on the predicted network conditions and the predicted radio conditions (**11040**).

FIG. **111** shows method **11100** of performing radio communications in accordance with some aspects. As shown in FIG. **111,** method **11100** includes receiving a plurality of predicted routes and a plurality of predicted data service requirements from a plurality of terminal devices **(11110),** collectively evaluating the plurality of predicted routes and the plurality of predicted data service requirements to obtain predicted network conditions **(11120),** and controlling communication activity for the plurality of terminal devices based on the predicted network conditions (**11130**).

3.3 Context-Awareness #3

In some aspects of this disclosure, a mesh network comprising e.g., Internet of Things (IoT) devices may implement an effective system of collecting measurements to initialize the mesh network and interfacing with external network management entities to enable outside control and oversight of network configurations.

FIG. **112** shows an illustration in accordance with some aspects implemented with wireless network **11200,** which may be a multi-hop network comprising IoT devices, or ’nodes’, operating on a mesh network or multi-hop radio standard. A non-limiting example can be as e.g., IEEE 802.15.4 (although other similar standards can analogously be utilized). The IoT nodes may generally utilize low-power radio interfaces that may utilize long sleep cycles. As shown in FIG. **112,** multiple IoT nodes may coordinate with one another and gateway device **11204** to form a wireless network, where gateway device **11204** may act as a coordinator node and provide access to an external wireless network to the IoT nodes of wireless network **11200.** Accordingly, the IoT nodes of wireless network **11200** may coordinate with one another, such as by utilizing other IoT nodes as ‘relay nodes’ in order to establish a connection with gateway device **11204** that relies on zero or more relay nodes as intermediaries. The IoT nodes may then communicate with one another and with gateway device **11204** via the mesh network. As shown in FIG. **112,** gateway device **11204** may interface with an external network, such as a cellular network, via network access node **11206,** which may be a cellular base station such as a 3GPP eNodeB. The interface between gateway device **11204** and network access node **11206** may be either a wireless or a wired interface. For example, in some aspects gateway device **11204** may operate on a radio access network provided by network access node **11206,** and may consequently transmit and receive data wirelessly with network access node **11206.** Alternatively, in some aspects gateway device **11206** may interface with network access node **11206** via a fiber optic, Ethernet, or similar wired interface. In some aspects, gateway device **11204** may operate on a 3GPP radio access network to interface with network access node **11206** or, alternatively, may operate on a non-3GPP radio access network such as Wi-Fi IEEE 802.11 to interface with network access node **11206.**

In some aspects, the 3GPP network may also verify and authenticate gateway device **11204** as a valid operator on the 3GPP network, which network access node **11206** may perform via MME **11208.** After authentication and verification, gateway device **11204** may be able to operate on the 3GPP radio access network and may provide access to wireless network **11200.** The IoT nodes may then utilize the 3GPP radio access network for data services, such as to access external internet servers and cloud services.

One or more IoT nodes of wireless network **11200** can be configured as a terminal device, such as in the manner of terminal device **9102** as shown in FIG. **92.** Accordingly, IoT node **11202** may transmit and receive radio signals, e.g., according to a multi-hop network standard such as IEEE 802.15.4, on wireless network **11200** with antenna system **9202** and RF transceiver **9204** under the control of baseband modem **9206.** Gateway device **11204** can be configured similarly to network access node **9110.** However, in some aspects gateway device **11204** may have both a radio interface configured to communicate with network access node **11206,** which may be e.g., a 3GPP radio interface such as LTE, UMTS, or GSM, and a radio interface configured to communicate with wireless network **11200,** which may be e.g., an 802.15.4 radio interface. FIG. **113** shows an exemplary internal configuration of gateway device **11204** in accordance with some aspects, which may include a first radio interface comprising antenna **11302,** radio module **11304,** and control module **11306,** and a second radio interface including antenna **11308,** radio module **11310,** and control module **11312.** Control module **11306** may be a radio modem configured to perform control and physical layer processing for the first radio interface and to control the transmission and reception of radio signals with radio module **11304** and antenna **11302** according to the radio interface of wireless network **11200,** such as 802.15.4 or another similar radio interface compatible with IoT deployments. Control module **11312** may be a radio modem configured to perform control and physical layer processing for the second radio interface and to control the transmission and reception of radio signals with radio module **11310** and antenna **11308** according to the radio interface of network access node **11206,** such as 802.15.4. Control module **11306** and control module **11312** may each include a processor configured to execute software-defined instructions for the protocol stack of the respective radio interface optionally in addition to one or more circuits configured with hardware-defined circuitry to perform processing tasks, such as for physical layer processing functions (e.g., hardware accelerators). Radio module **11304** and radio module **11310** may be configured as radio transceivers and include one or more amplifiers, filters, RF modulator/demodulators, DACs/ADCs, etc. Alternative to the configuration shown in FIG. **113,** gateway device **11204** may interface with network access node **11206** via a wired interface, such as a fiber optic or Ethernet connection, and may, for example, consequently only contain the first radio interface for communicating with wireless network **11200.**

Gateway device **11204** may play an important role in initializing and maintaining wireless network **11200.** As indicated above, gateway device **11204** may act in a 'bridging' role in order to provide the IoT nodes with access to the 3GPP radio access network (and other external networks, if applicable). Accordingly, gateway device **11204** may provide data routing and buffering between wireless network **11200** and network access node **11206.** Additionally, gateway device **11204** may authenticate nodes that request to wireless network **11200** in order to verify which IoT nodes are permitted to join wireless network **11200.**

In addition to such general functionality, in accordance with some aspects, gateway device **11204** may additionally utilize measurement reports provided by the IoT nodes of wireless network **11200** in order to optimize the configuration of wireless network **11200.** In particular, gateway device **11204** may control scheduling and contention parameters in order to enable wireless network **11200** to effectively manage collisions and contention between the IoT nodes. Furthermore, as will be later detailed, gateway device **11204** may additionally utilize a service interface to enable external configuration of wireless network **11200,** such as by a network manager operating outside of wireless network **11200.**

In particular, various aspects may attempt to address contention-related issues in wireless network **11200.** For example, wireless network **11200** may utilize a radio interface that includes a contention-based access system, such as 802.15.4 or another interface that utilizes a 'listen before talk' technique. In contention-based access systems based on listen before talk, a transmitter may need to sense for activity on a particular channel before transmitting on the channel. If the transmitter detects other transmissions, e.g., if contention occurs, the transmitter may need to wait before using the channel. The transmitter may then access the channel at a later time when no other transmissions are detected.

If wireless network **11200** is very dense, e.g., if IoT nodes generally have a large number of neighboring IoT nodes within range, there may be a high degree of contention. Conversely, if wireless network **11200** is sparse, e.g., if IoT nodes generally have zero or a small number of neighboring IoT nodes within range, there may only be a low degree of contention. Accordingly, IoT nodes operating in a dense network may be exposed to frequent collisions, which may severely impede data transfer.

In accordance with some aspects, gateway device **11204** may attempt to detect when wireless network **11200** is experiencing high levels of contention and, in response to detecting high levels of contention, may reconfigure wireless network **11200** in order to reduce the contention. Gateway device **11204** may be configured to evaluate contention levels monitoring certain measurements of wireless network **11200,** such as, without limitation, neighbor counters (e.g., the number of detectable neighbors at a given IoT node), contention counters (e.g., the number of contention occurrences), the amount of data transfer (e.g., the amount of data exchanged in a certain time period), channel access delay (e.g., the amount of delay experienced when attempting to access the channel) frame transmission delay, packet or frame error rate, retransmission counters, or other measurements. By monitoring these measurements, gateway device **11204** may estimate contention levels and adapt scheduling and contention parameters in order to alleviate high contention.

Many existing low-power wireless connectivity standards, such as those related to IoT including 802.15.4, do not currently provide a mechanism to discover network characteristics and to adapt network configurations in real time. Accordingly, various aspects may employ a new measurement collection and reporting scheme in order to obtain measurement reports at gateway device **11204** from the IoT nodes of wireless network **11200.** Gateway device **11204** may then evaluate the measurement reports in order to estimate operating conditions such as contention levels and adjust the configuration of wireless network **11200** based on the estimated contention levels.

Accordingly, the IoT nodes of wireless network **11200** may cooperate with gateway device **11204** by performing radio measurements and reporting the radio measurements to gateway device. The IoT nodes may collect the radio measurements during network initialization, e.g., prior to connecting to gateway device **11204,** and/or during normal operation on wireless network **11200.**

FIG. **114** shows exemplary method **11400** in accordance with some aspects, which an IoT node such as IoT node **11202** may perform. As will be detailed, as opposed to searching for a network to connect to and sending an association request to a detected network, IoT node **11202** may collect radio measurements during an initial network scan (e.g., prior to connecting to a network) and continue collecting radio measurements and scanning for networks until a timer expires. After the timer expires, IoT node **11202** may connect to a detected network and report the collected measurements to the detected network, e.g., a gateway device of the detected network. The gateway device may then be able to utilize the measurements in order to evaluate the current status of the network and make any necessary adjustments, in particular if high levels of contention are detected.

FIG. **115** shows an exemplary internal configuration of baseband modem **9206** in accordance with some aspects, which illustrates various components of baseband modem **9206** configured to perform method **11400.** As shown in FIG. **115,** baseband modem **9206** may include measurement module **11502** and control module **11504,** which may each be components of physical layer processing module **9208** and controller **9210.** The illustrated depiction of FIG. **115** may omit certain components of baseband modem **9206** that are not directly related to the current aspect in addition to control, power, and clock lines. In various aspects, the components of baseband modem **9206** shown in FIG. **115** may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware instructions) stored in a non-transitory computer readable storage medium, or as a mixed hardware-defined and software-defined module. The functionality of each component of baseband modem **9206** as detailed herein may therefore be embodied in a software-defined and/or hardware-defined module.

Returning to method **11400,** control module **11504** may start a measurement timer in **11402** and instruct measurement module **11502** to start scanning for available networks. Accordingly, measurement module **11502** may be configured to receive and decode data packets in order to determine whether any data packets contain discovery signals from available networks. For example, in accordance with a multi-hop network setting, one or more of the IoT nodes of wireless network **11200** may broadcast discovery signals that identify themselves, identify neighboring IoT nodes, and identify routing paths are available to a coordinating node such as gateway device **11204.** Accordingly, in some aspects measurement module **11502** may attempt to decode data packets to identify neighboring IoT nodes of wireless network **11200** in addition to detecting a valid routing path to gateway device **11204.** Depending on the proximity and radio conditions between IoT node **11202** and gateway device **11204,** measurement module **11502** may also be able to directly detect gateway device **11204** by receiving data packets from gateway device **11204.** By reading data packets from other IoT nodes of wireless network **11200** and gateway device **11204,** measurement module **11502** may detect wireless network **11200.** Control module **11504** may instruct measurement module **11502** to perform network scanning continuously or periodically according to a duty cycle, which may conserve power at the expense of performance.

In addition to reading received data packets for network scanning purposes, in some aspects measurement module **11502** may also perform radio measurements on received packets in **11404,** which measurement module **11502** may continue to do until the measurement timer expires. The measurement timer may therefore define an interval during which IoT node **11202** is expected to perform measurements before requesting association to wireless network **11200.** In some aspects, the measurement time can be defined in part of a radio access standard, or alternatively, may not be defined in a standard and may be an implementation-specific feature. Additionally, in some aspects control module **11504** may also select the measurement timer randomly within a given range, which may ensure that both IoT nodes do not synchronize their association procedures (as may occur, e.g., if the measurement timers were identical) and consequently that at least some IoT nodes are communicating during the measurements of other IoT nodes to yield useful measurement results.

Measurement module **11502** may perform any of a variety of radio measurements in **11404.** For example, in some aspects measurement module **11502** may measure the number of frames received during a given scanning interval, which may characterize the traffic level being produced by nearby IoT nodes. Additionally or alternatively, measurement module **11502** may count the number of neighboring devices detected, such as by incrementing a running counter each time a packet is received that has a previously undetected MAC address, which may characterize the number of nearby transmitting devices. In some aspects, measurement module **11502** may perform a signal strength measurement, such as by calculating the Received Signal Strength Indicator (RSSI) of each received packet, and tracking the signal strength over time, e.g., as an average RSSI., which may indicate whether other IoT nodes are far (weak RSSI) or near (strong RSSI) and consequently characterize network density. In some aspects, measurement module **11502** also perform a signal quality measurement such as a signal-to-noise ratio (SNR) or signal-to-interference-plus-noise ratio (SINR). Furthermore, measurement module **11502** may measure contention by determining the number of clear channel assessments (CCAs), e.g., a listen before talk test on a given channel to determine whether the channel is busy, that yield busy results per scanning interval (e.g., where measurement module **11502** may perform the CCA measurement even without data packets just to measure the contention level). Measurement module **11502** may collect all such measurements in **11404** for later provision to control module **11504.**

As previously indicated, measurement module **11502** may detect wireless network **11200** by reading packets from other IoT nodes of wireless network **11200** and gateway device **11202.** Instead of connecting to wireless network **11200** after detecting wireless network **11200,** IoT node **11202** may continue performing measurements until the measurement timer expires. Measurement module **11502** may therefore save any detected networks in **11406** and check whether the measurement timer has expired in **11408.** If the measurement timer has not expired in **11408,** measurement module **11502** may return to **11404** and **11406** to collect measurements on received packets and save any detected networks.

Upon expiry of the measurement timer in **11408,** measurement module **11404** may have collected measurements and saved detected networks, if any. Measurement module **11502** may provide the measurements and any detected networks to control module **11504,** which may determine in **11410** if any networks are available. If no networks are available, control module **11504** may restart the network scan in **11412** to again read data packets and perform radio measurements. If networks are available, control module **11504** may proceed to **11414** to connect to an available network.

As measurement module **11502** has identified data packets from other IoT nodes of wireless network **11200** and/or gateway device **11204,** control module **11504** may determine that wireless network **11200** is available in **11410.** For example, control module **11504** may identify that measurement module **11502** identified a data packet from another IoT node of wireless network **11200** and/or from gateway device **11204.** Control module **11504** may then connect to wireless network **11200** by sending an association request to wireless network **11200** in **11414.** In particular, if IoT node **11202** is within range of gateway device **11204,** control module **11504** may send an association request directly to gateway device **11204.** If IoT node **11202** is not within range of gateway device **11204,** control module **11504** may need to utilize other IoT nodes of wireless network **11200** as relay nodes in order to transmit an association request to gateway device **11204.** Control module **11504** may select the relay nodes to form a routing path between IoT node **11202** and gateway device **11204** based on the data packets received from neighboring IoT nodes, which may provide information that details which IoT nodes of wireless network **11200** offer the best paths (e.g., based on link conditions, number of hops, etc.) to gateway device **11204.**

In addition to transmitting the association request to gateway device **11204** in **11414,** in some aspects control module **11504** may also transmit the measurements collected by measurement module **11502** as a measurement report along with the association request (e.g., as an information element of the association request or as separate data sent proximate in time to the association request). Gateway device **11204** may receive the association request and measurement report from IoT node **11202** at control module **11306** via antenna **11302** and radio module **11304** and may process the association request and measurement report at control module **11306** in order to obtain statistics for wireless network **11200.** Control module **11306** may then perform the access control procedures in order to process the association request from IoT node **11202** to decide whether to allow IoT node **11202** to join wireless network **11200.** In certain cases, such as when an association request from IoT node **11202** includes a measurement report as an information element, control module **11306** may first perform security procedures to authenticate IoT node **11202** and may only collect the measurement reports once IoT node **11202** has been successfully authenticated and allowed to join wireless network **11200.**

Additionally or alternatively to collecting measurements prior to connecting to a wireless network, in some aspects IoT nodes may also periodically perform measurements and provide resulting measurement reports to a gateway device. For example, after permitting IoT node **11202** to join wireless network **11200,** gateway device **11204** may instruct IoT node **11202** to (or alternatively IoT node **11202** may be originally configured to) periodically perform radio measurements and report the radio measurement back to gateway device **11204.** Accordingly, IoT node **11202** may wake up to perform radio measurements at measurement module **11502** according to the measurement period and provide measurements to control module **11504** for collection. Control module **11504** may collect the measurements and transmit a measurement report to gateway device **11204.** In some aspects where gateway device **11204** controls measurement behavior of connected IoT nodes, control module **11306** may be able to selectively activate and deactivate measurements in certain IoT nodes by sending an instruction to an IoT node to trigger measurements, e.g., as a measurement trigger command frame. The instruction can also configure the type of measurements the IoT nodes are required to perform (e.g., frame counts, neighbor counts, signal strength, signal quality, channel activity assessment, channel access delay, frame transmission delay, packet or frame error rate, retransmission count). The instruction can also configure a specific measurement reporting mode. For example, each IoT node may be configured to report measurements according to either a normal reporting mode or a piggyback reporting mode, which gateway device **11204** may select and include in the instruction in order to prompt the IoT node to perform the desired type of reporting. In a scenario where gateway device **11204** configures IoT node **11202** in normal reporting mode, control module **11504** may periodically wake up measurement module **11502** according to the measurement period, measurement module **11502** may perform radio measurements and provide the measurements to control module **11504,** and control module **11504** may report the measurements to gateway device **11204.** In a scenario where gateway device **11204** has configured IoT node **11202** in piggyback reporting mode, control module **11304** may trigger radio measurements at measurement module **11302,** measurement module **11502** may perform radio measurements and provide the measurements to control module **11504,** control module **11302** may wait to identify a data packet scheduled to be transmitted to gateway device **11204** and may subsequently piggyback the measurement report on the identified data packet. The piggyback reporting mode may reduce the reporting overhead (e.g., as normal reporting mode may require standalone measurement report messages), in particular for applications that generate small data packets.

As multiple of the IoT nodes of wireless network **11200** may cooperate in these aspects, in some aspects control module **11306** may collect measurement reports from multiple IoT nodes along with association requests from the IoT nodes when the IoT nodes request to join wireless network **11200.** Furthermore, as the IoT nodes of wireless network **11200** may operate asynchronously, different IoT nodes may provide measurement reports to gateway device **11204** at different times. Control module **11306** may thus continuously collect measurement reports from IoT nodes.

Both the pre- and post-connection measurement reporting by IoT nodes may provide gateway device **11204** with radio measurements that may indicate the operating conditions of wireless network **11200**. As shown in FIG. **116**, control module **11306** may perform method **11600** in order to collect measurements from connected IoT nodes and to optimize operation of wireless network **11200** based on the collected measurements. As previously indicated, control module **11306** may include a processor configured to execute software-defined instructions, which may include control instructions that manages wireless network **11200**.

As shown in FIG. **116**, control module **11306** may collect measurement reports from IoT nodes in **11610**. As previously indicated, the measurement reports can include number of received frames, number of neighbors, signal strength measurements, signal quality measurements, and channel activity measurements, which may indicate operating conditions of wireless network **11200**. Control module **11306** may then determine the operating conditions of wireless network **11200** in **11620** based on the measurement reports. In particular, control module **11306** may estimate the density of wireless network **11200** and/or collision conditions of wireless network **11200** in **11620**. For example, as previously indicated each of number of received frames, number of neighbors, signal strength measurements, and channel activity measurements may indicate how closely the IoT nodes of wireless network **11200** are to each other and the frequency of collisions between IoT nodes of wireless network 11200. Specifically, high numbers of received frames may indicate high traffic levels and thus high density/collision frequency, high numbers of neighboring devices may indicate high density/collision frequency, high signal strength measurements may indicate proximate neighbors and thus high density/collision frequency, and high frequencies of busy channel evaluations (such as CCAs) may indicate high density/collision frequency. Control module **11306** may thus evaluate the measurement reports to estimate network density and collision potential as the operating conditions in **11620**.

Control module **11306** may then reconfigure wireless network **11200** based on the operating conditions in **11630,** in particular to reduce collision potential for dense networks. For example, control module **11306** may be configured to adjust scheduling parameters, contention parameters, and power usage parameters based on the operating conditions. For example, if control module **11306** detects that wireless network **11200** is a dense network, control module **11306** may adjust scheduling and contention parameters to be optimized for dense network operation, such as by adjusting the listen before talk scheme (e.g., adjusting the amount of time an IoT node needs to listen before transmitting or adjusting the amount of time an IoT node needs to wait after detecting a busy channel before retrying, e.g., a wait time), adjusting a transmission interval (e.g., adjusting the amount of time an IoT node needs to wait after a transmission before being permitted to perform another transmission), or adjusting a duty cycling scheme (e.g., by using a duty cycling scheme in dense network conditions in order to offset high power consumption caused by excessive contention or by adjusting power consumption commands and/or sleep commands to IoT nodes to conserve power in high contention scenarios). In some aspects, control module **11306** may also be configured to adjust the individual schedules of the IoT nodes, such as by selecting schedules of the IoT nodes that reduces the potential for collisions. In some aspects control module **11306** may be configured to adapt PHY and/or MAC layer parameters including scheduling and contention parameters may be effective in reducing conditions. In some aspects, control module **11306** may also be configured to reconfigure which IoT nodes are connected to wireless network **11200** in **11630**. For example, control module **11306** may be able to register and/or deregister specific IoT nodes. Control module **11306** may also in some aspects be configured to control which frequency band or bands wireless network **11200** utilizes. In some aspects, control module **11306** may be configured to adjust the routing configurations of wireless network **11200,** such as by changing the routing within the mesh architecture.

Accordingly, in various aspects control module **11306** may adapt the configuration of wireless network **11200** based on estimated density and/or collision conditions in order to improve the performance of wireless network **11200**. Control module **11306** may therefore be configured to react to the instantaneous operating conditions and/or any changes to the operation of wireless network **11200**. For example, control module **11306** may estimate network density and/or contention levels of wireless network **11200** and compare the estimated network density and/or contention level to a predefined threshold and, when the estimated network density and/or contention levels exceed the predefined threshold, triggering a reconfiguration of wireless network **11200** to reduce contention. Control module **11306** may quantitatively estimate the network density and contention level by evaluating the radio measurements to determine density and contention conditions. Control module **11306** may provide control signaling to the IoT nodes of wireless network **11200** that enforces the reconfiguration. Additionally, in some aspects gateway device **11204** may execute method **11600** during the initial formation of wireless network **11200** (such as when each of the IoT nodes are initially connecting to gateway device **11204,** and may provide measurement reports with association requests), which may enable gateway device **11204** to initially configure wireless network **11200** based on the measurement reports.

Various aspects may therefore enable a coordinating node such as a gateway device to receive measurement reports from nodes of a mesh network or other similar low-power network and to adaptively adjust the network configuration based on the measurement reports. Continuing with the setting of FIG. **112**, some aspects may also provide a service interface with which a network manager may externally monitor the operation of wireless network **11200** and/or externally adjust the configuration of wireless network **11200**. As shown in FIG. **112**, managing device **11216** may be connected to a different network than gateway device **11204**, such as a non-3GPP network (e.g., Wi-Fi). As managing device **11216** may not be connected to the same network as gateway device **11204**, managing device **11216** may not be able to interact with gateway device **11204**; however, some aspects may provide for a service interface supported by management Application Program Interface (API) server **11210** that provides a mechanism for managing device **11216** to interact with gateway device **11204**. These aspects may therefore enable managing device **11216** to both interact with gateway device **11204** to control wireless network **11200** and to monitor operation of wireless network **11200** via database **11212**, which may store configuration information and measurement information of wireless network **11200**.

Managing device **11216** may be a communication device operated by a network manager that is responsible for or has management authorization for wireless network **11200**. Managing device **11216** may be configured in the same manner as terminal device **9120** as shown in FIG. **92** and may have a radio interface comprising antenna system **9202,** RF transceiver **9204,** and baseband modem **9206** that is configured for operation with network access node **11214**, which may be a non-3GPP network access node such as a Wi-Fi AP. As network access node **11214** may not be connected to the same network as gateway device **11204**, managing device **11216** may not be able to directly access wireless network **11200** via network access node **11214**. In accordance with some aspects, management API server **11210** may be placed between the non-3GPP network of network access node **11214** and the 3GPP network of network access node **11206**. Management API server **11210** may therefore be implemented as a server that acts as an interface between different networks and may provide a service interface for managing device **11216** to interact with wireless network **11200.**

Managing device **11216** may be able to both monitor operation of wireless network **11200** and to configure operation of wireless network **11200** via management API server **11210**. As shown in FIG. **112,** gateway device **11204** may interface with database **11212** via management API server **11210.** Accordingly, after receiving measurement reports from the IoT nodes of wireless network **11200,** gateway device **11204** may upload the measurements to management API server **11210** (e.g., via a direct interface and/or via network access node **11206),** which may store the measurements at database **11212**. Gateway device **11204** may also upload the current configuration information, such as scheduling and contention parameters, to database **11212** via management API server **11200**. Database **11212** may be implemented as a server configured to store data, and may be implemented collectively with or separately from management API server **11210**. Database **11212** may therefore store the measurement and configuration information as operating information for wireless network **11200** provided by wireless network **11200**.

As managing device **11216** may not be able to interact directly with gateway device **11204** due to the different serving networks, managing device **11216** may rely on management API server **11210** to monitor and configure wireless network **11200**. For example, managing device **11216** may request measurement or configuration information for wireless network **11200** from management API server **11210,** which may retrieve the measurement or configuration information from database **11212** and provide the measurement or configuration information to client device **11216**. As shown in FIG. **112**, managing device **11216** may first generate an information request measurement or configuration information for wireless network **11200**. The information request may be prompted by a user of managing device **11216**, which may utilize an application layer at application processor **9212** of managing device **11216** to trigger an information request. Application processor **9212** may then generate the information request and transmit the information request to network access node **11214** via the radio interface provided by baseband modem **9206**, RF transceiver **9204**, and antenna system **9202**. Network access node **11214** may then route the information request to management API server **11210,** which may verify that managing device **11216** is authorized to access operating information such as measurement and configuration information for wireless network **11200**. Management API server **11210** may then query database **11212** for the measurement or configuration information specified in the information request. Database **11212** may respond to management API server **11210** with the measurement or configuration information, which may generate an information response with the measurement or configuration information and transmit the information response to managing device **11216** via network access node **11214**. Accordingly, as gateway device **11204** has previously uploaded the measurement and configuration information for wireless network **11200** to database **11212** via management API server **11210,** some aspects may enable managing device to access configuration or measurement information for wireless network **11200** even though managing device **11216** and gateway device **11204** may be connected to different networks, e.g., a non-3GPP network vs. a 3GPP network.

In addition to accessing measurement and configuration information for wireless network **11200** via management API server **11210,** in some aspects managing device **11216** may also configure and adapt wireless network **11200** via gateway device **11204**. For example, as previously indicated regarding method **11600**, gateway device **11204** can adapt and reconfigure wireless network **11200,** such as by adjusting scheduling and contention parameters and power control parameters, based on the measurement reports provided by the IoT nodes of wireless network **11200**. As management API server **11210** may provide managing device **11216** with a service interface to gateway device **11204**, these aspects may also enable managing device **11216** to adapt and configure wireless network **11200** externally. Accordingly, a user of managing device **11216**, such as a network manager, may utilize the service interface provided by management API server **11210** to instruct gateway device **11204** to reconfigure wireless network **11204**.

For example, managing device **11216** may first receive operating information such as measurement and/or configuration information for wireless network **11200** from management API server **11210** as detailed above. Managing device **11216** may then decide on a configuration change for wireless network **11200** based on the measurement and configuration information. For example, managing device **11216** may present the measurement and configuration information to a user of managing device **11216** (via the application layer), in response to which the user may decide on a configuration change for wireless network **11200,** such as in order to address excessive contention or density problem of wireless network **11200** indicated by the measurement information or to adjust measurement related parameters. Managing device **11216** may for example adjust scheduling and contention parameters or power-related parameters including listen before talk configurations, node scheduling, node duty cycling, PHY/MAC parameters, etc. Application processor **9212** of managing device **11216** may then generate a configuration change instruction addressed to gateway device **11204** and may transmit the configuration change instruction to network access node **11214** (e.g., via baseband modem **9206**, RF transceiver **9204,** and antenna system **9202**)**.** Network access node **11214** may then route the configuration change instruction to management API server **11210,** which may act in its role interfacing between the non-3GPP network and the 3GPP network and route the configuration change instruction to gateway device **11204**. Gateway device **11204** may receive the configuration change instruction and reconfigure wireless network **11200** according to the configuration change instruction, which may include adjusting scheduling or contention parameters or power control parameters. The configuration change instruction may also specify a change in measurement-related parameters, such as adjusting the measurement reporting period of the IoT nodes in order to receive more or less frequent measurement reports. Gateway device **11204** may transmit control signaling to the IoT nodes of wireless network **11200** in order to enforce the reconfiguration.

Various aspects may therefore also provide a service interface for a managing device to control a mesh network from a different network. However, some aspects can also be implemented when the managing device and gateway device are connected to the same network. For example, managing device **11216** may be connected to network access node **11206** (or another network access node of the same network) and thus may also be connected to the same 3GPP network as gateway device **11204**. Gateway device **11204** may similarly upload measurement and configuration information to database **11212**, which may be located inside of and/or external to the 3GPP network, or may provide the measurement and configuration information to managing device **11216** via the 3GPP network. Managing device **11216** may thus obtain the measurement and configuration information (e.g., via database **11212** or from gateway device **11204**) and may subsequently issue configuration change instructions to gateway device **11204** in order to reconfigure wireless network **11200** based on the measurement and configuration information, such as to address density or contention-related problems.

These aspects can also be used in conjunction with other aspects described herein, such as determining a predicted route for the IoT devices (e.g., in the manner detailed regarding any of FIGs. **94-111**) and/or using beamforming and V2I applications. The capabilities of IoT devices may be limited, mainly for IoT devices that resource constrained. The network measurements collected by gateway device **11204** may be combined with other context information (for example, information about the specific application, latency requirements, location, etc.) to decide how to best configure the operation of wireless network **11200**. In some aspects, beamforming for the IoT devices of wireless network **11200** can also be applied.

FIG. **117** shows exemplary method **11700** of managing a wireless multi-hop network according to some aspects. As shown in FIG. **117**, method **11700** includes receiving radio measurements from one or more nodes of the wireless multi-hop network (**11710**), evaluating the radio measurements to estimate operating conditions of the wireless multi-hop network related to network density or transmission contention (**11730**), and adjusting a configuration of the wireless multi-hop network based on a contention level of the wireless multi-hop network indicated by the operating conditions (**11740**).

FIG. **118** shows exemplary method **11800** of performing radio communications according to some aspects. As shown in FIG. **118**, method **11800** includes initiating a measurement timer and performing a radio scan to identify proximate wireless networks and to obtain one or more radio measurements of the proximate wireless networks (**11810**), after the measurement timer expires, selecting a target wireless network based on the identified proximate wireless networks (**11820**), and transmitting an association request to a coordinator node of the target wireless network that includes the one or more radio measurements (**11830**).

3.4 Context-Awareness #4

In some aspects of this disclosure, a vehicle-to-infrastructure (V2I) communication system may rely on context information of moving vehicles in order to accurately steer antenna beams from a network access node such as a Road Side Unit (RSU). As moving vehicles such as cars, automobiles or drones may travel at high speeds and may inadvertently act as moving obstacles to each other, beamsteering systems that rely on sector sweeps to determine antenna steering directions may be problematic. Accordingly, a roadside network access node may rely on context information such as vehicle position, vehicle speed, vehicle route, etc., in order to predict vehicle trajectories and subsequently steer antenna beams based on the predicted vehicle trajectories to effectively deliver wireless data to the vehicles. Some aspects may be applied to beamsteering for both radio-enabled vehicles and handheld/portable terminal devices carried by users in vehicles.

FIG. **119** shows an exemplary use case in accordance with some aspects in which roadside network access node **11900** may be configured to provide a radio access network to vehicles traveling on road **11912**. As shown in FIG. **119**, at a given point in time vehicles **11902**, **11904**, and **11906** may be traveling on road **11912** and may either vehicular terminal devices (e.g., a radio-enabled car) or may be carrying a handheld/portable terminal device inside of the vehicle. In order to increase the array gain for transmissions to vehicles **11902-11906,** roadside network access node **11900** may utilize beamsteering in order to focus an antenna beam to each of vehicles **11902-11906.** Roadside network access node **11900** may steer each of the antenna beams using an antenna array in which the signals at each antenna are phase-shifted and/or weighted in order to create patterns of constructive and destructive interference that collectively form the steered antenna beams as shown in FIG. **119.** Although depicted with a static network access node in the exemplary setting of FIG. **119**, some aspects may utilize these techniques for a mobile network access node or V2V context. For example, a vehicular network access node that is embodied as a vehicle (or equivalently another moving device, such as a drone) with network access node capabilities (e.g., transmission and reception of data on a radio access network and a backhaul connection to core or internet networks) may assume the role of roadside network access node **11900** in these aspects. Accordingly, the vehicular network access node may predict vehicle trajectories based on context information of one or more vehicles and steer one or more antenna beams according towards the one or more vehicles based on the predicted trajectories. In some aspects, these techniques may also be applied in a V2V setting, such as where a vehicle performs the functionality described herein for network access node **11900,** and accordingly predicts the trajectories of one or more vehicles based on context information and steers one or more antenna beams towards the one or more vehicles based on the predicted trajectories. These aspects may also be applied at nomadic network access nodes (such as mobile infrastructure nodes as described below regarding hierarchical communication).

In order to steer each antenna beam in the proper direction to each of vehicles **11902-11906,** roadside network access node **11900** may rely on knowledge of the direction at which each of vehicles **11902-11906** are positioned relative to roadside network access node **11900**. Beamsteering systems may identify steering directions through sector sweeps or other similar techniques in which a transmitter may 'sweep' though multiple different steering directions and receive feedback from a receiver that indicates the effectiveness of each steering direction. The transmitter may thus be able to pinpoint the proper steering direction based on the feedback (such as by using an initial coarse sweep in order to identify an initial sector and subsequently refining the identified sector to determine a narrow optimal steering direction).

However, in cases where the receivers are traveling at high speeds such as in FIG. **119**, the latency in performing a sweep over multiple sectors and receiving feedback may be too large to effectively track the receivers. The movement of the receivers may also be problematic in terms of obstacles. As shown in FIG. **119**, trees **11908** and **11910** may act as obstacles that provide varying degrees of obstruction to the line-of-sight (LOS) path between roadside network access node **11900** and vehicles **11902-11906** depending on the positioning of vehicles **11902-11906**. Additionally, vehicles **11902-11906** may act as obstacles to one another. As shown in FIG. **119**, vehicle **11906** may obstruct the LOS path between roadside network access node **11900** and vehicle **11904.** As the degree of obstruction caused by the obstacles may change over time as vehicles **11902-11906** move, sector sweeps may not be able to accurately detect the appropriate steering angle.

Accordingly, various aspects may utilize context information such as location information, velocity information, route information, etc., from vehicles **11902-11906** at roadside network access node **11900** in order to predict vehicle trajectories and perform beamsteering based on the predicted vehicle trajectories. Roadside network access node **11900** may therefore be configured to accurately track the movement of vehicles **11902-11906** and select effective steering directions for each antenna beam. Roadside network access node **11900** may also be configured to predict the locations of other vehicles based on their context information in order to respond to obstruction caused by other vehicles, and may be able to apply machine learning in order to detect the stationary obstacles such as trees **11908** and **11910** and adjust the beamsteering accordingly. For example, roadside network access node **11900** can utilize a machine learning technique such as a supervised or unsupervised learning, reinforcement learning, genetic algorithms, rule-based learning support vector machine, artificial neural networks, Bayesian-tree modeling, or hidden Markov modeling. This beamsteering adjustment at roadside network access node **11900** may be considered intra-RSU beam switching, where roadside network access node **11900** may adjust the beam based on vehicle and obstacle positioning (e.g., based on an adaptive codebook).

In some aspects, roadside network access node **11900** may be configured in the same manner as network access node **9110** as shown in FIG. **93** and accordingly may include antenna system **9302**, radio module **9304**, and communication module **9306.** Antenna system **9302** may be an antenna array comprising multiple antennas, which roadside network access node **11900** may utilize to steer antenna beams as shown in FIG. **119.** In various aspects, roadside network access node **11900** may utilize any beamsteering technique to steer antenna system **9302,** including any analog (e.g., with analog RF phase shifters to manipulate phase shifts of the signals at each antenna of antenna system **9302**), digital baseband (e.g., with a digital processor to manipulate phase shifts and/or gains of the signals at each antenna of antenna system **9302**)**,** and/or hybrid (e.g., with a mixture of analog RF phase shifters and digital processors) beamforming to steer antenna system **9302**. This may include the use of an adaptive beamsteering codebook, which may provide different complex weighting (phase and weight) settings for the antennas of antenna system **9302** that provide specific antenna beams pointed in a certain direction. Roadside network access node **11900** may therefore be configured to adjust the antenna beam produced by antenna system **9302** by adjusting the complex antenna weightings, which may in some aspects include the use of an adaptive beamsteering codebook. As previously indicated, this may be considered intra-RSU beam switching.

Roadside network access node **11900** may be configured to operate antenna system **9302**, radio module **9304,** and communication module **9306** to provide a radio access network to vehicles **11902-11906.** For example, in some aspects roadside network access node **11900** may be configured to provide a 5G radio access network using e.g., a millimeter wave (mmWave) radio access technology. Roadside network access node **11900** may also be configured to operate antenna system **9302**, radio module **9304**, and communication module **9306** according to multiple radio access technologies and accordingly may be a multi-RAT radio access node. For example, in some aspects roadside network access node **11900** may be configured to operate according to multiple of 5G (e.g., mmWave), 4G (e.g., LTE), 3G (e.g., UMTS), and 2G (e.g., GSM) radio access technologies.

FIG. **120** shows an exemplary internal configuration of communication module **9306** in accordance with some aspects. As shown in FIG. **120**, communication module **9306** can include collection module **12002**, prediction module **12004**, and steering control module **12006**, which may be components of physical layer module **9308** and/or control module **9310** in some aspects. The configuration of communication module **9306** depicted in FIG. **120** may omit certain components of communication module **9306** that are not directly related to the current aspect in addition to control, power, and clock lines. Each of the components of communication module **9306** shown in FIG. **120** may be structurally realized as a hardware-defined module, e.g., as one or more dedicated hardware circuits or FPGAs, as a software-defined module, e.g., as one or more processors executing program code defining arithmetic, control, and I/O instructions (e.g., software and/or firmware instructions) stored in a non-transitory computer readable storage medium, or as a mixed of hardware-defined and software-defined module. The functionality of each component of communication module **9306** as detailed herein may therefore be embodied in a software-defined module and/or hardware-defined module.

As previously indicated, roadside network access node **11900** may predict the trajectory of vehicles and steer antenna beams based on the predicted trajectories. As sector sweep-based steering may be inefficient in scenarios with fast moving vehicles, roadside network access node **11900** may utilize context information such as location, velocity, and route information for vehicles in order to predict the trajectories. FIG. **121** shows method **12100** according to some aspects, which communication module **9306** of roadside network access node **11900** may perform in order to steer beams of antenna system **9302** based on predicted vehicle trajectories.

As previously indicated, each of vehicles **11902-11906** may either be configured as a vehicular terminal device (e.g., a car with radio communication capabilities) or may be a vehicle that is carrying a handheld/portable terminal device. Accordingly, one or more of vehicles **11902-11906** may include an instance of terminal device **9102** as shown in FIG. **92**, either as a built-in component of the vehicle or as a standalone handheld/portable terminal device carried by a user in the vehicle. Regardless, vehicles **11902-11906** may be configured to report context information including location, velocity, or route information to roadside network access node **11900**. For example, vehicle **11902** may obtain the location or velocity information via sensors such as sensor **9218** and sensor **9220**, where sensor **9218** may be e.g., a positioning system such as a GPS or other GNSS system and sensor **9220** may be e.g., an accelerometer or velocity sensor. Application processor **9212** may be configured to obtain the context information sensor data from sensors **9218** and **9220** and provide the context information to baseband modem **9206** for wireless transmission to roadside network access node **11900**. Additionally and/or alternatively, in some aspects application processor **9212** may be configured to execute a navigation application program with which a user may input a destination of vehicle **11902**. The navigation application program may then generate a target route of vehicle **11902**, which application processor **9212** may then obtain as context information and provide to baseband modem **9206** for wireless transmission to roadside network access node **11900**.

In some aspects, vehicle **11902** may be configured to transmit an initial context report and/or periodic context reports containing context information to roadside network access node **11900**. For example, vehicle **11902** may initially connect to roadside network access node **11900** (such as after driving inside the coverage area of roadside network access node **11900** on road **11912**) and may provide roadside network access node **11900** with an initial context report that contains context information for vehicle **11902**. Vehicle **11902** may then be configured to periodically report (e.g., every 100 ms or another reporting period) updated context information to roadside network access node **11900**, which may reflect changes location, velocity, or route.

One or more of the vehicles connected to roadside network access node **11900** may report context information to roadside network access node **11900** with one or both of initial and periodic context reports. Accordingly, as detailed in FIG. **121**, collection module **12002** may receive and collect the context information from vehicle **11902-11906** in **12110.** As vehicles **11902-11906** may provide context reports at different times, in some aspects collection module **12002** may continuously collect context reports that are transmitted by connected vehicles and received at roadside network access node **11900** via antenna system **9302** and radio module **9304.**

Collection module **12002** may provide the context reports to prediction module **12004,** which may evaluate the context information for each of vehicles **11902-11906** in **12120** in order to predict vehicle trajectories. For example, prediction module **12004** may receive location information and velocity information for vehicle **11902** in an initial context report from vehicle **11902.** Prediction module **12004** may then be configured to utilize the current location and velocity of vehicle **11902** to predict the trajectory of vehicle **11902** on road **11912** over time, which may include anticipating that vehicle **11902** will maintain the same velocity from the current position. The velocity information may also be a directional velocity, which may indicate the direction that vehicle **11902** is traveling, which prediction module **12004** may also utilize to predict the vehicle trajectory. In some aspects, collection module **12002** may also receive periodic context reports from vehicle **11902** at subsequent times, which may indicate updated location and velocity information for vehicle **11902.** Prediction module **12004** may receive the updated location and velocity information from collection module **12002** and update the predicted trajectory of vehicle **11902** accordingly.

As previously indicated, in some aspects the context reports may also contain route information for vehicle **11902**. Accordingly, prediction module **12004** may be configured to utilize the route information to predict the trajectory of vehicle **11902,** in particular for cases where the coverage area of roadside network access node **11900** covers multiple roads. For example, using the route information of vehicle **11902**, prediction module 12004 may be able to predict turns and other road and lane changes of vehicle **11902** based on road and lane changes indicated by the route information. Prediction module **12004** may therefore include such road and lane changes in the predicted trajectory for vehicle **11902** obtained in **12004.**

In some aspects, prediction module **12004** may additionally or alternatively utilize knowledge of the driving area of vehicle **11902** in order to obtain the predicted trajectory. For example, prediction module **12004** may know the physical path of road **11912,** which may be preprogrammed or uploaded (such as from a geomapping database) into roadside network access node **11900.** Prediction module **11902** may therefore be aware of turns, curves, and similar changes in road **11912** and may be able to generate a predicted trajectory for vehicle **11902** in **12904** based on knowledge of the path of road **11912** and the current location and velocity of vehicle **11902,** such as by anticipating when vehicle **11902** will change its trajectory according to a change in the path of road **11912.** Alternative to or in addition to being preprogrammed with information for road **11912,** in some aspects prediction module **11902** may be configured to apply machine learning in order to identify the path of road **11912.** For example, by observing changes in location information for multiple vehicles over time, prediction module **12004** may be configured to identify locations in road **11912** that lead to trajectory changes in vehicles, which prediction module **12004** may utilize to map the path of road **11902** and subsequently predict vehicle trajectories.

In some aspects, prediction module **12004** may be configured to apply machine learning in order to identify obstacles as well to learn changes in antenna beams and links over time. Prediction module **12004** may therefore adapt the prediction process over time based on the machine learning, which may be performed online or offline. Nonlimiting examples of machine learning techniques that prediction module **12004** can apply include supervised or unsupervised learning, reinforcement learning, genetic algorithms, rule-based learning support vector machines, artificial neural networks, Bayesian-tree modeling, or hidden Markov modeling.

FIG. **119** depicts exemplary predicted trajectories for vehicles **11902-11906** in the arrows leading each of vehicles **11902-11906** in accordance with some aspects, where the length of each arrow indicates an exemplary velocity of the corresponding vehicle. Accordingly, prediction module **12004** may determine a predicted trajectory for each of vehicles **11902-11906** in **12120** based on the context information obtained in **12110**. Prediction module **12004** may then provide the predicted trajectories to steering control module **12006**. Steering control module **12006** may then calculate the steering directions for each of vehicles **11902-11906** based on the predicted trajectories in **12130** and steer the antenna beams of antenna system **9302** according to the calculated steering directions. As the predicted trajectories may indicate the expected position of vehicles **11902-11906** relative to roadside network access node **11900,** steering control module **12006** may be able to calculate the angle at which each of vehicles **11902-11906** will be located relative to network access node **11900** and utilize the angle as the steering direction.

After calculating the steering directions, steering control module **12006** may provide steering instructions that specify the calculated steering directions to antenna system **9302**, which may receive the steering instructions and implement the steering directions by adjusting the phases and/or gains of individual antennas of antenna system **9302** in accordance with a beamsteering scheme (where antenna system **9302** may divide the antenna array into e.g., 3 sub-arrays in the case of FIG. **119** and steer the collective antenna beam from each sub-array toward one of vehicles **11902-11906**). In some aspects, steering control module **12006** may issue the steering instructions, e.g., as explicit angles or, if a steering codeword scheme is used, as codewords that correspond to the calculated steering directions. Antenna system **9302** may receive the steering instructions and steer the antenna beams of antenna system **9302** according to the steering instructions in **12130.**

As the steering direction for each antenna beam can change over time as vehicles **11902-11906** move along road **11912,** in some aspects steering control module **12006** may continually update the steering directions according to the predicted trajectories provided by prediction module **12004** in order to reflect the position changes of vehicles **11902-11906.** Accordingly, steering control module **12006** may be configured to periodically recalculate the steering directions based on the predicted trajectories and provide updated steering instructions to antenna system **9302.** If prediction module **12004** has provided any updated predicted trajectories, such as if one of vehicles **11902-11906** are providing periodical context reports that enable prediction module **12004** to update the predicted trajectory, steering control module **12006** may recalculate the steering directions based on the updated predicted trajectories; otherwise, steering control module **12004** may recalculate the steering directions based on the original predicted trajectories by anticipating that vehicles **11902-11906** will continue along the original predicted trajectory.

Roadside network access node **11900** may therefore utilize context information including location, velocity, and route information of vehicles **11902-11906** in order to predict the trajectories of vehicles **11902-11906** and perform beamsteering to direct antenna beams at vehicles **11902-11906** based on the predicted trajectories. As the vehicles traveling on road **11912** that are within the coverage area of roadside network access node **11900** can change over time, roadside network access node **11900** may be configured to perform beamsteering for different vehicles (where the number of vehicles and thus the number of required antenna beams may also change). Accordingly, 'new' vehicles may move within the coverage area of roadside network access node **11900** and, after connecting to roadside network access node **11900**), may provide an initial context report and/or periodic context reports to enable roadside network access node **11900** to predict their trajectory and direct antenna beams accordingly. Roadside network access node **11900** may continue tracking each vehicle until the vehicle reselects to another network access node. As roadside network access node **11900** may not require any feedback from vehicles **11902-11906** (in contrast to sector sweep applications that require feedback), roadside network access node **11900** may perform 'open-loop' beamsteering. Roadside network access node **11900** may also combine these aspects with closed-loop beamsteering techniques and use both context information and feedback (such as from sector sweeping) from vehicles **11902-11906** in order to calculate beamsteering directions based on both predicted trajectories and steering feedback.

In addition to the beamsteering techniques as described above, various roadside network access node **11900** may utilize other information and data in order to perform beamsteering. In particular, in some aspects prediction module **12004** may additionally or alternatively be configured to identify blockages between roadside network access node **11900** and vehicle **11902** in **12120.** For example, prediction module **12002** may identify the locations of stationary or permanent obstacles such as trees **11908** and **11910** and, based on the predicted trajectory of vehicle **11902,** may be able to determine when the obstacles will block the antenna beam from roadside network access node **11900** and vehicle **11902.** The locations of obstacles may be preprogrammed into roadside network access node **11900** (such as from a geomapping database). In some aspects, prediction module **12004** may also identify the locations of obstacles using other sensors. For example, roadside network access node **11900** may be configured with a radar sensor, imaging sensor (such as a camera), sonar sensor, etc., which roadside network access node **11900** may apply to detect the location of obstacles along road **11912.** Prediction module **12004** may then access the sensor data to predict blockages between roadside network access node **11900** and vehicle **11902.**

As vehicles may act as obstacles to each other, in some aspects prediction module **12004** may also predict when other vehicles will block the path between roadside network access node **11900** and vehicle **11902.** For example, prediction module **12004** may predict the trajectories of each of vehicles **11902-11906** and may therefore identify when one of vehicles **11902-11906** will block another of vehicles **11902-11906.** FIG. **119** depicts an exemplary scenario in which vehicle **11906** may block the path between roadside network access node **11900** and vehicle **11904,** thus blocking the antenna beam to vehicle **11904.** However, as denoted by the exemplary vehicular trajectory arrows, vehicles **11904** and **11906** may be traveling at different velocities, thus causing the amount of blockage by vehicle **11906** to change over time. Accordingly, prediction module **12004** may predict the varying degrees of blockage caused by vehicles over time.

There may also be scenarios where other vehicles are not connected to roadside network access node **11900** (e.g., are not radio-enabled or may be connected to a different network/network access node). These other vehicles may form moving obstacles that roadside network access node **11900** may not be able to detect via context information; accordingly, prediction module **12004** may rely on external sensor data (e.g., from a radar sensor, an imaging sensor (such as a camera), a sonar sensor, etc.) to detect other vehicles and other moving obstacles and to track their trajectories to identify blockages.

In some aspects, roadside network access node **11900** may therefore be configured to detect different obstacles along road **11912.** Prediction module **12004** may then identify or predict the stationary location or moving trajectory of such obstacles in relation to vehicles **11902-11904** and may manipulate beamsteering based on the detected obstacles, such as by one or more of beam broadening, intra/inter RSU beam switching, or switching to another radio access technology. FIG. **122** shows an exemplary scenario according to some aspects where vehicle **11906** may block vehicle **11904,** where scenarios **12200** and **12210** illustrate the changing positions of vehicles **11904** and **11906** according to their respective trajectories. In scenario **12200,** vehicle **11906** may form a substantial blockage between roadside network access node **11900** and vehicle **11904** and may only leave a narrow unobstructed path. Accordingly, prediction module **12004** may utilize the predicted trajectories of vehicles **11904** and **11906** to determine the degree of blockage (e.g., in angular degrees) that vehicle **11906** is causing to vehicle **11904.** Prediction module **12004** may then provide the degree of blockage to steering control module **12006,** which may perform beam narrowing or beam broadening with antenna system **9302** in order to provide a substantially unobstructed antenna beam to vehicle **11904.** As shown in scenario **12200,** steering control module **12006** may select a narrow antenna beam when vehicle **11906** is providing a high degree of blockage to vehicle **11904.** However, once vehicle **11906** moves forward relative to vehicle **11904** (according to a higher velocity of vehicle **11906**) in scenario **12210,** the degree of blockage may decrease, which prediction module **12004** may identify with the predicted trajectories of vehicles **11904** and **11906.** Accordingly, steering control module **12006** may broaden the antenna beam in scenario **12210.** Prediction module **12004** and steering control module **12006** may similarly perform beam broadening and beam narrowing in response to stationary obstacles as the degree of blockage changes as a vehicle moves.

Roadside network access node **11900** may also perform inter RSU beam switching in response to detected obstacles. For example, roadside network access node **11900** may handoff the radio access connection for a vehicle to another roadside network access node. In some aspects, roadside network access node **11900** may handoff a vehicle based on obstacle block and/or due to movement of the vehicle away from roadside network access node **11900** toward the other roadside network access node. As the other roadside network access node is located at a different position relative to the vehicle, the transmit antenna beam may also be switched by virtue of the handoff. In some aspects, roadside network access node **11900** may provide the other roadside network access node with beamsteering information and/or other positional information for the vehicle, which may give the other roadside network access node a basis for selecting a beamsteering direction for the vehicle. Both this inter-RSU beam switching and the intra-RSU beam switching (switching beamsteering from the same roadside network access node based on e.g., an adaptive codebook) previously detailed may enable improved link quality between roadside network access node **11900** and served vehicles.

Additionally, in some aspects roadside network access node **11900** may adaptively switch radio access technologies based on detected obstacles. For example, radio access technologies with high carrier frequencies such as mmWave may experience substantial pathloss on account of the high carrier frequency and consequently may be impaired by obstructed transmission paths. Accordingly, if roadside network access node **11900** is initially using mmWave to communicate with vehicle **11904** and vehicle **11906** directly obstructs vehicle **11904** as shown in scenario **12300** of FIG. **123,** prediction module **12004** may detect the blockage and notify steering control module **12006.** Steering control module **12006** may then switch from mmWave to an alternate radio access technology that is less susceptible to pathloss, such as LTE, UMTS, GSM, or another radio access technology with a lower carrier frequency. Roadside network access node **11900** may thus notify vehicle **11904** of the radio access technology switch (e.g., via control signaling generated by steering control module **12006** and transmitted via radio module **9304** and antenna system **9302** using the original mmWave connection) and proceed to transmit further data using the alternate radio access technology. When prediction module **12004** determines that the blockage is reduced or gone, e.g., when vehicle **11906** moves further past vehicle **11904,** prediction module **12004** may notify steering control module **12004** which may then trigger a switch back to mmWave (e.g., potentially using beam narrowing according to the remaining degree of blockage caused by vehicle **11906,** if any). Roadside network access node **11900** may similarly be able to utilize another side-link connection such as dedicated short range communications (DSRC) as an alternate radio access technology.

In some aspects, roadside network access node **11900** may additionally utilize sensor data reported by vehicles **11902-11906** in order to detect obstacles. For example, in another scenario, vehicle **11906** may not be connected to roadside network access node **11900;** accordingly, prediction module **12004** may not be able to predict the trajectory of vehicle **11906** based on context information and may not be able to predict blockages to vehicle **11904** caused by vehicle **11906.** However, vehicle **11904** may be equipped with sensors such as a radar sensor, an imaging sensor, a sonar sensor, etc., which may be e.g., sensor **9218** and/or sensor **9220.** Vehicle **11904** may therefore be able to detect vehicle **11906** with sensors **9218** and **9220,** which baseband modem **9206** may report to roadside network access node **11900.** For example, baseband modem **9206** may be able to determine the location and/or velocity of vehicle **11906** and report location and velocity information to roadside network access node **11900.** Roadside network access node **11900** may then be configured to utilize the location and velocity information of vehicle **11906** as context information and consequently predict the trajectory of vehicle **11906** with prediction module **12004.** Steering control module **12006** may then similarly adjust the beamsteering of antenna system **9302** based on the blockage caused by vehicle **11906** to vehicle **11904** as detailed above. Vehicle **11904** may also be able to identify stationary obstacles such as trees **11908** and **11910** with sensors **9218** and **9220** and report the location information to roadside network access node **11900,** which prediction module **12004** and steering control module **12006** may utilize to adjust the beamsteering.

In some aspects, roadside network access node **11900** and vehicles **11902-11906** may additionally employ relaying in order to address blockages. For example, in scenario **12300** shown in FIG. **123,** vehicle **11906** may cause substantial blockage to vehicle **11904,** which may critically impair transmission from roadside network access node **11900** to vehicle **11904.** Instead of accepting the pathloss and attempting to transmit through vehicle **11906,** roadside network access node **11900** may instead utilize vehicle **11906** as a relay point in order to relay data from roadside network access node **11900** to vehicle **11904** and vice versa. Accordingly, after prediction module **12004** has identified the predicted trajectories of vehicles **11904** and **11906** and steering control module **12006** has identified vehicle **11906** as a blockage to vehicle **11904** based on predicted trajectories, steering control module **11906** may instruct vehicle **11906** (e.g., via control signaling) to act as a relay point for data intended for vehicle **11904.** Roadside network access node **11900** may then transmit data intended for vehicle **11904** to vehicle **11906** (e.g., via the antenna beam with vehicle **11906**). Vehicle **11906** may receive the data intended for vehicle **11904** and forward the data to vehicle **11904,** such as using DSRC or another type of vehicle-to-vehicle (V2V) communication or sidelink. Roadside network access node **11900** may continue transmitting data to vehicle **11904** via vehicle **11906** as a relay point until steering module **12006** identifies that vehicle **11906** is no longer blocking vehicle **11904** (or the degree of blockage has decreased to an acceptable amount). Roadside network access node **11900** may then switch back to a direct transmission path to vehicle **11904** using beamsteering.

Although detailed above regarding roadside network access node **11900,** in some aspects the context information-based beamsteering can also be implemented in vehicles **11902-11906** in the reverse link. For example, vehicle **11902** may include an instance of collection module **12002,** prediction module **12004,** and steering control module **12006** in baseband modem **9210.** Collection module **12002** may then collect sensor measurements from sensors **9218** and/or **9220** (via application processor **9212**) in order to determine the location and velocity of vehicle **11902.** Roadside network access node **11900** may also broadcast its location, which may enable prediction module **12004** of vehicle **11902** to predict the trajectory of vehicle **11902** relative to roadside network access node **11900.** Steering control module **12006** may then utilize the predicted trajectory to perform beamsteering at antenna system **9202** in order to direct an antenna beam from vehicle **11902** to roadside network access node **11900** and continually update the steering direction of the antenna beam based on the predicted trajectory. Alternatively, steering control module **12006** may report the steering direction of the beam used by roadside network access node **11900** to vehicle **11902,** which may then utilize the reported steering direction to steer a beam back towards roadside network access node **11900.**

Various aspects can be implemented in a variety of other radio access scenarios, in particular including other V2I use cases. FIG. **124** shows an implementation of the fourth context-awareness in a drone use case according to some aspects, where drones **12402, 12404,** and **12406** may be connected with network access node **12400.** Drones **12402** may accordingly report context information such as location, velocity (e.g., directional velocity), and/or route information to network access node **12400.** Network access node **12400** may be configured in the same manner as roadside network access node **11900** and may predict aerial trajectories of drones **12402-12406** with prediction module **12004** based on the context reports. Steering control module **12006** may then steer antenna system **9302** of network access node **12400** form antenna beams directed at each of drones **12402-12404.** Prediction module **12004** may also detect obstacles such as trees **12408** and **12410** and building **12412** and adapt the antenna beams and other transmission aspects such as radio access technology switching and relaying in order to transmit and receive data with drones **12402-12406**.

In addition to the drone use case depicted in FIG. **124,** these aspects can be applied to any type of moving device, including both vehicular and non-vehicular cases, and any scenario involving different types of moving devices.

While description of some aspects above may generally focus on a transmission setting, the detailed beamsteering techniques may be equivalently applied in a reception setting where an antenna array may apply phase shifts and/or gains to individual antenna elements to produce a directional receive beam.

FIG. **125** shows exemplary method **12500** of performing radio communications according to some aspects. As shown in FIG. **125,** method **12500** includes receiving vehicle movement information from a vehicle (**12510**), determining a predicted trajectory of the vehicle based on the vehicle movement information (**12520**), and steering an antenna beam towards the vehicle based on the predicted trajectory (**12530**).

3.5 Context-Awareness #5

In some aspects of this disclosure, a radio environment map (REM) infrastructure may utilize a distributed architecture (e.g., server architecture, cloud infrastructure, mobile edge computing infrastructure, roadside infrastructure, multitude of devices, multitude of terminal devices, multitude of vehicles, etc.) in order to locally store REM data at locations for which the REM data is relevant. Additionally, the REM infrastructure may utilize a data provision system that selectively provides certain types of context information to requesting devices. Accordingly, instead of utilizing a centralized service, some aspects may store REM data locally and may provide only concise amounts of REM data, which may reduce backhaul load and avoid excessive data download at requesting devices. These aspects may therefore provide a mechanism for network access nodes to get channel and radio information, network access node information (for example, available cells), and radio access technology availability information (for example, which RATs are available) without receiving feedback from (or pinging) terminal devices.

In certain cellular systems, base stations constantly send reference signals to user equipments (UEs), which may measure the reference signals to determine channel quality and other radio characteristics. The UEs may then report the measurements back to the base stations, which may utilize the reported measurements for various tasks including user scheduling, beamforming/beamsteering, modulation and coding scheme selection, handovers and other mobility operations, etc. However, the continuous measurement reporting may incur a large overhead and many new techniques such as network multi-input multi-output (MIMO) and multi-user/massive MIMO may consequently not be supported due to the excessive feedback demands. Cross-cell coordination also remains in limited stages as techniques such as real-time interference coordination may need fast fiber-like connections for transferring channel and scheduling information. These aspects may be used with common channel aspects, e.g., a common channel selected based on REM information.

While measurement reporting and feedback may be effective in tracking instantaneous changes in the radio conditions, the radio environment may generally be static for most users. Given that scheduling functions tend to be very conservative in practice, the correlation between large-scale properties of the channel and the final optimal scheduling solution is more pronounced.

Additionally, new 5G developments such as mmWave, massive MIMO, and massive IoT deployments are becoming more prevalent. Due to the high frequency bands employed by mmWave, radio signals (which mainly utilize beamforming) may be easily blocked by the environment, such as trees, walls, ceilings, etc. As there may be a large number of antennas and a high density of devices, channel feedback for massive MIMO and IoT devices may present a bottleneck.

Radio Environment Maps, or REMs, may present a valuable solution that alleviates many of the overhead issues related to channel feedback. These REMs may provide a map of the channel environment at different locations and thus may provide a representation of obstacles and pathloss characteristics that radio access network devices may utilize in place of or in addition to channel feedback techniques. Accordingly, as opposed to reference signal transmission and feedback reporting to determine channel conditions, network access nodes and terminal devices may access a REM in order to determine channel conditions between transmitters and receivers. The REM may be stored in a central cloud and queried by requesting devices for radio information.

As opposed to storing REM data in a central server, some aspects of this disclosure may utilize a distributed architecture that generates and stores REM data locally for a local geographic area, where terminal devices and network access nodes proximate to the local geographic area may access the local REM data without causing significant strain across the network infrastructure. Additionally, these aspects may include a request-response framework that selectively provides concise selections of REM data to requesting devices, thus avoiding excessive downloads.

FIG. **126** shows an exemplary network architecture of communication network **12600** in accordance with some aspects. As shown in FIG. **126,** terminal devices **9102** and **9104** may be connected to network access node **9110,** which may interface with core network **12606.** Core network **12606** may be connected to cloud network **12608,** which may be one more internet-based networks that include central REM server **12610.** Network access node **9110** may therefore provide a radio access network to terminal devices **9102** and **9104** that enables terminal device **9102** and **9104** to access cloud network **12608** via core network **12606.** One or more additional network access nodes may also interface with core network **12606,** such as network access node **9112.**

The radio access network section of communication network **12600,** including terminal devices **9102** and **9104** and network access nodes **9110** and **9112,** may rely on REM data in order to identify radio conditions and to perform tasks such as scheduling, beamforming/beamsteering, modulation and coding scheme selection, handovers and other mobility operations, radio access selection, traffic management, power/cost management, etc. However, instead of accessing central REM server **12610,** which may involve data transfer across core network **12606** and via cloud network **12608,** network access node **9110** and terminal devices **9102** and **9104** (in addition to any other terminal devices connected to network access node **9110**) may access local REM server **12602** while network access node **9112** (and any terminal devices connected to network access node **9112**) may access local REM server **12604.** While FIG. **126** depicts REM servers **12602** and **12604** as interfacing with one network access node each, other REM servers may interface with multiple network access nodes and may thus provide multiple network access nodes with access to the same database of REM data.

REM servers **12602** and **12604** may each store different REM data that is locally relevant to the respective areas assigned to REM servers **12602** and **12604.** For example, REM server **12602** may store REM data that is relevant for a first geographic area around network access node **9110** while REM server **12604** may store REM data that is relevant for a second geographic area around network access node **9112** (although there may be some overlap between the first and second geographic areas). FIG. **127** shows an exemplary mapping according to some aspects where network access node **9110** may be located in area **12710** while network access node **9112** may be located in area **12720** (which may or may not correspond to the actual coverage areas of network access nodes **9110** and **9112**). REM server **12602** may store REM data, such as channel conditions and other radio coverage information, for area **12710** (although REM server **12602** may not necessarily be physically located in area **12710**) while REM server **12604** may store REM data for area **12720.** Although areas **12710** and **12720** are shown as mutually exclusive in FIG. **127,** there may be overlap between the areas that each REM server stores data for; however, there may be at least some of areas **12710** and **12720** that is mutually exclusive.

Accordingly, terminal devices **9102** and **9104** and network access node **9110** may query REM server **12602** for REM data for area **12710,** which REM server **12602** may provide on request. FIG. **128** shows an exemplary internal configuration of REM server **12602,** which may include REM controller **12802** and REM database **12804.** In some aspects, REM controller **12802** may be a processor configured to execute instructions in order to process and responds to queries in addition to calculating and generating REM data for storage or update in REM database **12604.** REM database **12604** may be a memory component configured to store REM data, which may be a geomap with radio condition data linked to various locations on the geomap that provides a spatial representation of the radio environment across a geographic area. The REM data may also be temporally dependent, such as to reflect changing radio conditions over different times of day and/or days of the week.

Terminal devices **9102** and **9104** and network access node **9110** may thus query REM server for REM data by transmitting a request to REM controller **12802,** which may retrieve the requested REM data and provide a response back to the requesting devices. As the radio environment in area in **12710** may be dynamic over time, terminal devices **9102** and **9104** and network access node **9110** may provide REM server **12602** with radio condition information that REM server **12602** may utilize to update the REM data stored in REM database **12804.** For example, terminal devices **9102** and **9104** may perform radio measurements at various locations in area **12710** and provide geotagged radio measurements to REM controller **12802.** REM controller **12802** may then apply radio propagation modeling in order to update the REM data at the geotagged locations based on the associated radio measurements and may thus maintain accurate REM data in REM database **12804** over time. REM controller **12802** may calculate the REM data based on a combination of recent and past information indicated by the geotagged radio measurements. In additional to the spatial dimension of the REM data, REM controller **12802** may additionally generate the REM data with time-dependent considerations, such as time of day and day of the week, in order to represent the radio environment as varying over time.

In some aspects, REM controller **12802** may request the radio measurements. Additionally or alternatively, in some aspects terminal device **9102** and/or **9104** may be configured to periodically perform radio measurements and report the radio measurements back to REM controller **12802.** As terminal devices **9102** and **9104** and network access node **9110** may aim to reduce overhead through the use of REM data, in some aspects terminal devices **9102** and **9104** may be configured to perform radio measurements with an relatively long period (as opposed to some channel feedback, which may require feedback every transmission time interval and thus have a small period) or may perform continual radio measurements and report the radio measurements collectively with a large period between reports (e.g., may perform radio measurements over the period and report the radio measurements for a given period after each period ends). In some aspects, REM server **12604** may be configured in the same manner as REM server **12602.**

REM servers **12602** and **12604** may therefore each store local REM data that is updated based on local radio measurements. As the REM data is stored and updated locally, terminal devices and network access nodes may not need to query a centralized REM server to obtain REM data and may therefore alleviate network congestion by interacting with local REM servers. As shown in FIG. **126,** cloud network **12608** may also contain central REM server **12610,** which may store REM data for a comprehensive geographic area that includes both areas **12710** and **12720.** Accordingly, REM servers **12602** and **12604** may be configured to periodically upload (which may be triggered and controlled by REM controller **12802** to upload the REM data from REM database **12804** to central REM server **12610**) the REM data stored in REM database **12804** to central REM server **12610,** which may hold a REM database that contains REM data for areas **12710, 12720,** and various other geographic areas. In order to reduce network congestion, REM servers **12602** and **12604** may perform REM data uploads infrequently, such as once per day. Accordingly, central REM server **12610** may hold a comprehensive REM while REM servers **12602** and **12604** may hold local REM data that is relevant to a limited area.

FIG. **126** depicts REM servers **12602** and **12604** as interfacing with network access nodes **9110** and **9112**; accordingly, in some aspects REM servers **12602** and **12604** may be deployed locally at network access nodes, such as inside an equipment room which may allow communication module **9306** of a network access node to quickly access the REM data. Alternatively, in some aspects REM servers **12602** and **12604** may be deployed at various other locations. For example, REM servers **12602** and **12604** may be deployed as edge computing devices, such as with Mobile Edge Computing (MEC) servers that may be positioned between the radio access network and core network or at a network access node. Alternatively, in some aspects REM servers **12602** and **12604** may also be deployed in core network **12606.** As previously indicated, REM servers **12602** and **12604** may contain REM data related to an area that is relevant to multiple network access nodes and may therefore interface with multiple network access nodes with any such deployment.

Terminal devices and network access nodes may therefore be able to query local REM servers for REM data that is relevant to their surrounding vicinity and, upon moving to a new area in the case of terminal devices, may query a different REM server for REM data that is relevant to the new area. While terminal devices may be mobile, there may not be a need to have REM data for excessively large geographic areas (e.g., for 100 or more miles/ or kilometers) and terminal devices may instead be able to utilize REM data for a limited area at any given time and downloading REM data for other areas only when moving into these areas. Similarly, as network access nodes are generally stationary as in the case of some base stations, network access nodes may only need to have REM data for a limited area at any given time. REM servers **12602** and **12604** may therefore function to locally store and update REM data and to provide REM data to requesting devices

In addition to local REM data storage and update, in some aspects REM servers **12602** and **12604** may provide an advantageous mechanism for requesting devices such as terminal devices and network access nodes to request and receive REM data. Similarly to how a single terminal device or network access node may not need to have REM data for excessively large areas (e.g., a terminal device may not need to download REM data that covers hundreds of miles), requesting devices may not need to download all of the REM data from a local REM server. For example, REM server **12602** may store an immense database of spatial-temporal data for area **12710,** including a comprehensive collection of performance metrics such as network load, retransmission parameters (such as Hybrid Automatic Repeat Request (HARQ) metrics), packet/bit/block error rate (PER/BER/BLER) statistics, call drop probabilities, signal strength and signal quality data, pathloss and obstacle information, interference levels, etc., that are represented in both spatial and temporal dimensions across area **12710**. Additionally, REM server **12602** may store such performance metrics for different RATs, such as a separate collection of performance metrics for each of 5G (e.g., mmWave), 4G (e.g., LTE), 3G (e.g., UMTS), 2G (e.g., GSM) in addition to other radio access technologies such as Wi-Fi (such as for public Wi-Fi networks). Furthermore, although the radio access and core network sections of communication network **12600** shown in FIG. **126** may be operated by a single network operator, REM servers **12602** may also be configured to interface with multiple networks (e.g., with the infrastructure of multiple PLMNs) and accordingly may store performance metrics for multiple different networks.

Accordingly, while REM server **12602** may store a substantial amount of REM data for area **12710,** a given requesting device (terminal device, vehicle or network access node) may not need to download all of the REM data for area **12710.** Various aspects may therefore utilize a request-response mechanism that provides specific REM data to requesting devices that is most relevant. Accordingly, these aspects may avoid congestion issues in some aspects by only providing relevant data to requesting devices.

The request-response mechanism may be based on a ‘context information detail level’, a ’device capability class’ of the requesting device, an area or space, intended use, required throughput, required quality of service, etc. Local REM servers such as REM servers **12602** and **12608** may be configured to retrieve specific REM data based on the context information detail level, e.g., how comprehensive/detailed in scope of REM data the requesting device wants, and the device capability class, e.g., how complex the radio capabilities of the requesting device are. Accordingly, if the requesting device specifies a low context information detail level, REM server **12602** may only retrieve generic REM data to provide to the requesting device, such as a list of which RATs are available without any accompanying detailed spatial-temporal performance metrics. Conversely, if the requesting device specifies a high context information detail level, REM server **12602** may retrieve a detailed set of REM data including lists of available RATs in addition to spatial-temporal performance metrics for each RAT.

Similarly, if the requesting device has a low device capability class and is thus only capable of basic radio communications, such as LTE and Wi-Fi, REM server **12602** may optionally only provide REM data for the basic supported RATs. Conversely, if the requesting device has a high device capability class and is able to support more complex RATs such as mmWave, advanced Wi-Fi (e.g., IEEE 802.11ax), TV White Space technology, etc., REM server **12602** may provide REM data for both the basic and complex RATs. Device capability class may also indicate the distinction between terminal devices and network access nodes, where network access nodes may require more comprehensive REM data and may thus be classified as a higher device capability class while terminal devices may only need less comprehensive REM data and may be classified as a lower device capability class.

FIG. **129** shows message sequence chart **12900** illustrating the request-response mechanism according to some aspects. As shown in FIG. **129,** terminal device **9102** may first transmit a REM data request to REM server **12602.** In particular, controller **9210** of baseband modem **9206** may determine that REM data is needed, such as in order to perform radio access selection, traffic management, power/cost management, or another terminal device radio operation. Controller **9210** may then identify the context information detail level and the device capability class and generate the REM data request to include context information detail level and the device capability class. The device capability class may be static for terminal device **9102**; for example, a first device capability class may be for terminal devices that only support basic radio communications such as 2G/3G and Wi-Fi, a second device capability class may be for terminal devices that support more complex radio communications such as 2G/3G/LTE and Wi-Fi, while a third device capability class may be for terminal devices that support 3G/3G/LTE, Wi-Fi, mmWave, TV White Space, etc.

In some aspects, the context information detail level can vary depending on the radio operation that terminal device **9102** intends to use the REM data for in addition to other parameters. For example, if terminal device **9102** merely intends to perform RAT selection, terminal device **9102** may only need low-level REM data that specifies which RATs are available. Controller **9210** may therefore select a low context information detail level. However, if terminal device **9102** is currently transferring high-sensitivity data, such as with strict QoS requirements, and needs to select a new cell, terminal device **9102** may need more detailed performance metrics such as network load, PER/BER/BLER statistics, latency, HARQ performance, etc., for each cell on a fine temporal-spatial basis. Accordingly, controller **9210** may select a high context information detail level.

In some aspects, the request-response mechanism may have a predefined framework of context information detail level and device capability classes which controller **9210** may utilize. FIG. **130** shows table **13000** according to some aspects that illustrates an exemplary framework of requesting device parameters that is defined over a two-dimensional of context information detail levels (from detail level 0 to detail level M) and device capability classes (from capability class 0 to capability class N). As shown in FIG. **130,** capability class 0 may indicate basic radio capabilities while capability class N may indicate the most complex radio capabilities. Additional capability classes between capability class 0 and capability class N with intermediate radio capabilities may similarly be defined. Other detail levels between detail level 0 and detail level M may similarly be defined.

Controller **9210** may therefore select the context information detail level and device capability class based on requesting device parameter framework shown in table **13000** (where the exact capability classes and detail levels may be configurable) to generate the REM data request and proceed to transmit the REM data request to REM server **12602** in **12902** (via a software-level connection with control module **11902** of REM server **12602** that relies on RF transceiver **9204** and antenna system **9202** and network access node **9110** as a radio interface). REM server **12602** may receive the REM data request at REM controller **12802,** which may be configured to process REM data requests, retrieve the appropriate REM data from REM database **12804,** and provide the REM data to the requesting device. Accordingly, as shown in FIG. **129,** REM controller **12802** may process the REM data request to identify the requesting device parameters in **12904.** REM controller **12802** may therefore identify the context information detail level and device capability class specified by terminal device **9102** in the REM data request. REM controller **12802** may then retrieve the appropriate REM data from REM database **12804** according to the requesting device parameters. REM controller **12802** may then generate a REM data response containing the retrieved REM data and transmit the REM data response to terminal device **9102** in **12908.** As the REM data response may contain a significant amount of data, such may include establishing a data transfer connection and transferring the data to terminal device **9102** over time.

Controller **9210** may receive the REM data response in **12908** and apply the REM data in **12910.** In particular, in various aspects controller **9210** may utilize the REM data to perform radio access selection, traffic management, power/cost management, or another terminal device radio operation. Controller **9210** may include other information in the REM data request, such as location information of terminal device **9102.** Instead of providing terminal device **9102** with REM data for all of area **12710,** REM server **12602** may then instead provide REM data proximate to the current location of terminal device **9102** (or within a certain radius of the current location or in the direction of travel, which terminal device **9102** may also specify). The radius may be determined on the basis of route information, network coverage, presence of other devices, speed of movement, direction, availability of data, etc.

In some aspects, network access node **9110** may similarly request and receive REM data from REM server **12602,** which may be controlled by control module **9310** in place of controller **9210.** As network access node **9110** may operate as network-side infrastructure responsible for providing radio access connections to multiple terminal devices, the types and depth of REM data required by network access node **9110** from REM server **12602** may be different from that required by terminal device **9102.** For example, network access node **9110** may use the REM data to perform scheduling, beamforming/beamsteering, modulation and coding scheme selection, handovers and other mobility operations, etc., which may utilize different types of REM data (e.g., different performance metrics) and different specificities of REM data. Additionally, as network access node **9110** may be responsible for providing service to many different terminal devices in its coverage area, in some aspects network access node **9110** may wish to access REM data for multiple locations and for a greater area size than a single terminal device. Network access node **9110** may specify such information in the REM data request. The type of device, e.g., terminal device vs. network access node, may be specified to REM server **12602** as part of the device capability class, device information detail level, or as a separate information field of the REM data request.

Accordingly, the request-response mechanism may utilize requesting device parameters such as device capability class and context information detail level to ensure that requesting devices receive only REM data that is relevant and do not exceed additional unneeded REM data (which may waste resources). For example, terminal device **9102** may not require any REM data for RATs that it does not support, such as mmWave. These aspects may utilize device capability classes in the REM data request to ensure that REM data for unsupported RATs is not provided, which may not be useful and may only waste resources. In another example, terminal device **9102** may only require high-level context information, such as generic information on available RATs. A specific case may be if terminal device **9102** is moving at a very high velocity (such as traveling with a user in a vehicle). As terminal device **9102** may have high mobility, most detailed REM data that is tied to very specific locations may quickly become terminal device **9102** may only remain relevant for a very short period of time before terminal device **9102** moves to a new location. However, if terminal device **9102** is generally stationary, terminal device **9102** may wish to optimize the current radio access connection with network access node **9110** to a maximum level. As the REM data will likely be valid for an extended period of time due to the limited mobility of terminal device **9102,** terminal device **9102** may wish to receive the fine-grained REM data (which may have significant size) and utilize the REM data to optimize the connection. Alternatively, terminal device **9102** may wish to first start with high-level REM data, such as generic RAT availability information, and only request more detailed REM data (including detailed performance metrics) if an initial RAT selection is unsatisfactory.

In some aspects, terminal device **9102** may also be able to indicate specific routes or areas for which REM data is desired, such as in the case of terminal device **9102** identifying a route that a user will take and pre-downloading REM data for the identified route from REM server **12602.**

While each requesting device may theoretically be able to better optimize a radio connection if all of the REM data is available, it may be a waste of resources for REM server **12602** to provide large amounts of REM data. Requesting devices may thus be configured to consider how efficient it will be to receive more comprehensive REM data. As shown in table **13000,** in some aspects each entry in the capability class-detail level table may have an ‘efficiency metric indication’ that indicates the degree of optimization that can occur in terms of link configuration with the REM data that will be provided. The efficiency metric can for example indicate the level of optimality that can be achieved in spite of the lack of detailed context information (e.g., a typical average such as a mean or median value divided by the theoretical maximum) for energy perf bit (Joules/bit), the throughput, etc. The efficiency metric can therefore indicate whether it is worth it for a terminal device to request further context information for a specific application. Requesting devices may therefore consider the efficiency metric indication when selecting device capability classes and context information detail levels for REM data requests.

Some aspects may also apply information centric network (ICN) to enable discovery, advertising, routing, and storing of data across the network. The networking actions may therefore be based on the actual information/content of the data rather than the traditional method source-destination addresses (as in IP-based networking). Accordingly, the generator of the REM data (such as a local REM server, e.g., REM server **12602,** that is connected to a network of other REM servers that each store REM data for a different area) can ‘publish’ locally-generated REM data to certain other anchor nodes (which may be other REM servers such as REM server **12604** or other non-REM server node) and the requestors of the data (requesting devices such as terminal devices **9102** and **9104** and network access nodes **9110** and **9112)** can ’subscribe’ to the REM data. Each requestor can then obtain data from their local anchor node after subscribing and subsequently discovering the data from their local anchor node. Other network nodes may then be able to route/store the data based on ‘content specific labels’ as opposed to traditional end-user IP addresses. The publishing, discovery, requesting, and access permissions of the REM data can thus utilize such ICN principles to generate and route REM data between local REM servers, central REM servers, and requesting devices.

In some aspects, REM server **12602** may also be configured to identify terminal devices and network access nodes that are providing unreliable data (e.g., as radio measurements for updating the REM data stored in REM database **12804)** and to remove data provided by such devices from REM database **12804.**

FIG. **131** shows exemplary method **13100** for managing REM data in a distributed manner in accordance with some aspects. As shown in FIG. **131,** method **13100** includes generating local REM data at each of a plurality of local REM servers for a different respective geographic area based on radio information provided by devices within the respective geographic area (**13110**), uploading the local REM data from each of the plurality of local REM servers to a central REM server (**13120**), and storing the REM data at the central REM server for a collective geographic area comprising the respective geographic area (**13130**).

FIG. **132** shows exemplary method **13200** for managing REM data in accordance with some aspects. As shown in FIG. **132,** method **13200** includes receiving a REM data request from a requesting device (**13210**), wherein the REM data request includes a device capability class and an information detail level, identifying REM data from a REM database according to the device capability class and the information detail level (**13220),** wherein the REM database is configured to store REM data for a geographic area associated with the REM database, and providing the REM data to the requesting device (**13230**).

While detailed above with a general focus on cellular communication technologies, some aspects can be applied to REM data and servers for any radio access technology.

### 3.6 Context-Awareness #6

In some aspects of this disclosure, a scheduling function at a network access node (such as a MAC scheduler) may observe traffic to predict traffic patterns of single users, groups of users, or machine-type communication. The scheduling function may then use the traffic patterns to govern scheduling for terminal devices, devices or vehicles. In some aspects, the scheduling function may determine when periods of heavy traffic are likely to occur, and may subsequently then initiate a low-overhead scheduling pattern such as semi persistent scheduling (SPS) during anticipated bursty traffic periods to support transfer of large amounts of data without incurring high overhead costs. In some aspects, the scheduling function may use the traffic patterns to identify when terminal devices are exhibiting non-compliant behavior, such as radio behavior that does not comply with a standard that governs the radio activity between terminal devices and network access nodes, or radio behavior indicating suspicious activity. The scheduling function may then adjust scheduling when non-compliant or suspicious behavior is detected. These aspects may be used with common channel aspects, e.g., a common channel selected on the basis of traffic pattern analysis.

FIG. **133** depicts exemplary user traffic patterns in accordance with some aspects. Traffic pattern **13300** depicts exemplary traffic data rates in the receive direction (e.g., downlink) while traffic pattern **13302** depicts exemplary traffic data rates in the transmit direction (e.g., uplink). As shown in FIG. **133,** one or more bursty traffic periods (**13304-13312**) may occur at various times, where the data rate during bursty traffic periods **13304-13312** may be significantly higher than the data rate during other periods. The bursty traffic periods may also be considered ’bursty’ traffic periods.

Accordingly, in an exemplary scenario, terminal device **9102** of FIG. **91** may experience bursty traffic periods where there is a significant amount of user-plane traffic exchanged with network access node **9110** in the downlink and/or uplink directions (e.g., as in bursty traffic periods **13304-13312**). For example, there may be certain periods when a user of terminal device **9102** triggers a traffic-intensive activity such as a voice call, a video call, a file download, a video or audio stream, an online gaming session, web browsing, etc. During the duration of such traffic-intensive activities, there may be heavy traffic exchange between network access node **9110** and terminal device **9102.** The traffic may also be sporadic or inconsistent, and may be composed of intermittent ’bursts’ as opposed to a constant stream. The radio access connection between terminal device **9102** and network access node **9110** may accordingly occupy a large amount of bandwidth and contribute to network loading.

Traffic-intensive activities may involve large quantities of user-plane data that may also be concentrated into sporadic bursts. For example, a voice call may produce a large amount of voice data transferred from terminal device **9102** to network access node **9110** (in the uplink) and transferred from network access node **9110** to terminal device **9102** (in the downlink). There may be bursts of traffic during speech periods that may be bridged by very little traffic during silence periods. Many types of internet traffic may produce such bursty traffic, including web browser data, video streams, and other internet traffic. Traffic-intensive activities may also produce large amounts of control-plane data that can add significant overhead to the radio access connection. For example, in order for terminal device **9102** to know which time-frequency resources contain downlink data intended for terminal device **9102** or are reserved for uplink data of terminal device **9102**, network access node **9110** may provide scheduling and resource allocation information to terminal device **9102** as control-plane information. For example, in order for network access node **9110** to know about pending uplink data, terminal device **9102** transmits uplink control plane information, such as buffer status reports (BSRs) and scheduling requests (SRs).

Control-plane information may contribute to significant signaling overhead in the radio access network, in particular during bursty traffic periods where terminal device **9102** may receive and/or transmit continuous control information to support a constant stream of user-plane traffic. The control plane data may also contribute to radio interference and processing power consumption at terminal devices and network access nodes. Accordingly, some radio access technologies such as LTE utilize low-overhead scheduling schemes such as SPS for specific types of radio activity. For example, in an LTE setting, a network access node (e.g., eNodeB) can activate an SPS-configured downlink assignment or uplink grant with a special control message. Upon receipt of the special control message, a terminal device may know *a priori* that it will receive downlink data or can transmit uplink data every SPS interval. For example, standardized SPS intervals can be e.g., 10, 20, 32, 40, 64, 80, 128, 160, 320, or 640 ms. Accordingly, a terminal device configured with an SPS interval of e.g., 40 ms will know that it will receive downlink data every 40 ms (for downlink SPS) or that it will be able to transmit uplink data every 40 ms (for uplink SPS). While the network access node may still provide control information specifying resource allocations for every repetition of the SPS interval, the terminal device will not need to transmit any buffer status reports (BSRs) or scheduling requests (SRs) to request uplink grants. Additionally, the inactivity timer (e.g., drx-inactivityTimer in LTE) will not be started for SPS-configured downlink assignments, and the terminal device may be able to (depending on timer settings) stop monitoring the control channel and switch the receive chain into low-power mode a few subframes in advance.

These aspects may predict bursty traffic periods, such as those shown in FIG. 133, based on observations of user traffic patterns and may apply SPS scheduling during predicted bursty traffic periods. Various aspects may not rely on higher-layer signaling that indicates bursty traffic, and may instead focus on identifying bursty traffic periods based on monitoring of user traffic (which may be any type of traffic and not only limited to voice packet data). Accordingly, some aspects may avoid the high overhead that can occur during bursty traffic periods, which may reduce load and congestion on the radio access network.

FIG. **134** shows method **13400** in accordance with some aspects. A network access node such as network access node **9110** as shown in FIG. **93** may implement method **13400** at communication module **9306.** In some aspects, network access node **9110** may implement this functionality at a MAC scheduler component, such as at control module **9310.** In some aspects, communication module **9306** may implement this functionality with hardware-defined and/or software-defined modules.

As shown in FIG. **134,** communication module **9306** may observe user traffic of a terminal device to obtain user traffic patterns in **13410.** For example, there may be certain periods or times of day when a user of terminal device, such as terminal device **9102,** triggers a large amount of user-plane traffic. For example, a user may frequently perform certain traffic-intensive activities at predictable times, such as a user that regularly browses the internet on weekday evenings or during lunch time. In various other examples, a user may regularly watch certain shows (scheduled e.g., every week or day) on terminal device **9102,** may regularly make voice or video calls with terminal device **9102** at certain times or on certain days, may regularly stream sporting events with terminal device **9102** at certain times or on certain days, may regularly utilize terminal device **9102** to listen to internet radio at certain times or on certain days, may regularly utilize terminal device **9102** for online gaming at certain times or on certain days, etc.

Accordingly, by identifying the user traffic patterns associated with these regular uses of terminal device **9102,** communication module **9306** may be able to anticipate when (e.g., time of day and/or day of week) a user will initiate a traffic-intensive activity (causing a bursty traffic period) with terminal device **9102.** In some aspects, communication module **9306** may be configured to execute a predictive algorithm (embodied as software-defined instructions stored on and retrievable from a non-transitory computer readable medium) in **13420** to identify user traffic patterns. For example, communication module **9306** may monitor and measure the uplink and downlink traffic of terminal device **9102** and input the measured uplink and downlink data rates into the predictive algorithm. The predictive algorithm (executed by communication module **9306**) may then evaluate the uplink and downlink data rates to identify user traffic patterns, such as what times of day and/or days of the week that bursty traffic periods regularly occur. In some aspects, communication module **9306** may apply machine learning techniques such as decision tree learning, neural network learning, support vector machines, etc., in order to process the user traffic observations (e.g., uplink and downlink data rates) and identify user traffic patterns. In some aspects, communication module **9306** may observe user traffic from terminal device **9102** over an extended observation time, such as days, weeks, months, etc. In some aspects, as terminal device **9102** may be mobile and not remain connected to network access node **9110** for entirety of the extended observation time, communication module **9306** may maintain a database of user traffic observations (identified via identity information of terminal device **9102**) that communication module **9306** collects during times when terminal device **9102** is connected to network access node **9110.** In some aspects, communication module **9306** may interface with a central server and/or other network access nodes to obtain user traffic observations for terminal device **9102** observed by other network access nodes.

After identifying user traffic patterns based on user traffic observations in **13410,** communication module **9306** may predict bursty traffic periods based on the user traffic patterns. For example, if communication module **9306** identifies that a user of terminal device **9102** regularly triggers traffic-intensive activities at a certain time of day during a certain day (e.g., a user traffic pattern), communication module **9306** may predict that upcoming occurrences of the certain time of day during the certain day will potentially be bursty traffic periods. Communication module **9306** may therefore identify the certain time of day during the certain day as a bursty traffic period. Depending on the traffic patterns obtained by communication module **9306** in **13410,** communication module **9306** may identify one or more bursty traffic periods based on the user traffic patterns in **13420.** In some aspects, each of the bursty traffic periods may be a certain time of day and, in some aspects, may also occur on a specific day (e.g., depending on whether the bursty traffic period regularly occurs on a specific day or days) and/or span a specific duration of time (e.g., depending on whether the bursty traffic period regularly takes place over a specific duration of time). In some aspects, communication module **9306** may predict bursty traffic from loading a particular website dependent on content (e.g., ads, flash video, etc.).

After predicting the bursty traffic periods in **13420,** communication module **9306** may apply SPS during predicted bursty traffic periods. Accordingly, when the specific time and/or day occurrence of a bursty traffic period occurs, and terminal device **9102** is connected to network access node **9110,** communication module **9306** may trigger SPS for terminal device **9102.** Accordingly, as opposed to providing control plane information during e.g., every subframe (as in some cases of conventional scheduling, or ‘dynamic scheduling’), communication module **9306** may apply SPS to terminal device **9102.** Accordingly, communication module **9306** may reduce overhead by refraining from transmitting control plane information to terminal device **9102** every subframe. In addition to overhead reduction from transmitting the downlink control plane information, terminal device **9102** may refrain from transmitting uplink control plane information when SPS is active, such as buffer status reports (BSRs) and scheduling requests (SRs). SPS may therefore also reduce power consumption at terminal device **9102** as terminal device **9102** may not transmit as much information as for conventional dynamic scheduling. Uplink interference may also be reduced. Terminal device **9102** may also conserve power due to the reduced processing demands of SPS.

In some aspects, communication module **9306** may continue to apply SPS for the duration of the predicted bursty traffic period (e.g., if the user traffic pattern also indicated a duration of the bursty traffic period). In some aspects, communication module **9306** may monitor the actual traffic of terminal device **9102** to determine whether to continue applying SPS, and in some aspects may terminate SPS if terminal device **9102** is not generating bursty traffic. In some aspects, communication module **9306** may update the user traffic patterns (obtained in **13420**) based on user traffic observations observed during application of SPS in **13430.** In some aspects, communication module **9306** may apply method **13400** to multiple terminal devices, and accordingly may obtain specific user traffic patterns for multiple terminal devices and utilize the user traffic patterns to individually trigger SPS for the each of the multiple terminal devices.

In some aspects, communication module **9306** may additionally or alternatively apply user traffic patterns to detect and react to non-compliant behavior. For example, the radio access connection between terminal device **9102** and network access node **9110** may be defined in a standard. Exemplary standards include e.g., 3GPP standards (such as for LTE, UMTS, and GSM), IEEE standards (e.g., for IEEE 802.11 Wi-Fi and other radio access technologies), European Telecommunications Standards Institute (ETSI) standards, etc. Accordingly, terminal devices and network access nodes can be expected to follow the protocols defined in the standard, e.g., to perform compliant behavior.

However, in particular at the terminal side, terminal devices and network access nodes can be configured to execute non-compliant behavior. For example, in an exemplary scenario a terminal device can be configured (e.g., by a manufacturer or a user) to report false information to a network access node, such as in order to obtain more radio resources, faster data rates, etc. For example, a terminal device can be configured to report false BSRs or Channel State Information (CSI) feedback, which may be able to manipulate a network access node into providing different radio resources than normal. By manipulating the network access node via such non-compliant behavior, a manufacturer or user may be able to improve user experience, such as by influencing a network access node to provide higher data rates, more reliable connections, faster speed connections, more bandwidth, etc. However, such benefits may come at the expense of other users as finite radio resources may be unfairly distributed towards the non-compliant terminal devices.

Accordingly, in some aspects network access node **9110** may implement the functionality of the current aspect in order to detect and respond to non-compliant behavior. FIG. **135** shows method **13500** in accordance with some aspects. In some aspects, network access node **9110** may implement this functionality at a MAC scheduler component, such as at control module **9310.** In some aspects, communication module **9306** may implement this functionality with hardware-defined and/or software-defined modules.

As shown in FIG. **135,** communication module **9306** may observe user traffic of terminal device **9102** to obtain traffic patterns in **13510.** In some aspects, communication module **9306** may observe control plane traffic in **13510**, which may include monitoring control plane information such as BSRs and CSI feedback. In some aspects, communication module **9306** may also observe user plane traffic in **13510**, and may associate user plane traffic with corresponding control plane traffic. For example, communication module **9306** may observe BSRs and/or CSI feedback provided by terminal device **9102** and observe the user traffic generated in connection with the BSRs and/or CSI feedback. For example, as BSRs indicate the amount of pending uplink data, the value reflected in the BSR should directly correspond with the amount of uplink data transmitted by terminal device **9102** after the BSR. In another example, as CSI feedback indicates the channel quality observed at terminal device **9102,** the CSI feedback should reflect the error rate (including block/bit/packet error rates, ACK/NACK rates, etc.) as CSI feedback that indicates strong channels should correspond to low error rates and vice versa for CSI feedback that indicates weak channels. In some aspects, CSI feedback provided by other terminal devices may be expected to correlate to some degree with CSI feedback provided by terminal device **9102.** Accordingly, in some aspects communication module **9306** may also compare CSI feedback provided by terminal device **9102** with CSI feedback provided by other terminal devices.

Communication module **9306** may then identify traffic patterns based on the associated control plane and user plane information. For example, communication module **9306** may identify whether the control plane information provided by terminal device **9102** regularly fits with the associated user plane information. In some aspects, communication module **9306** may identify occurrences where the BSR and/or CSI feedback does not match the associated user plane information, such as where BSR values do not match the amount of transmitted uplink data (e.g., within a tolerance value to prevent false positives) or CSI feedback does not match the error rate or CSI feedback provided by other terminal devices (e.g., within a tolerance value to prevent false positives). In some aspects, communication module **9306** may count a number of occurrences where control plane information does not match observed user plane information or control plane information provided by other terminal devices.

Communication module **9306** may then identify non-compliant behavior based on the traffic patterns in **13520.** For example, if terminal device **9102** regularly provides control plane information that is potentially non-compliant (e.g., a high number of occurrences of conflicting control plane and user plane data, such as exceeding a threshold), communication module **9306** may identify terminal device **9102** as exhibiting non-compliant behavior in **13520.**

Communication module **9306** may then enforce scheduling decisions based on non-compliant behavior in **13530.** If communication module **9306** does not identify non-compliant behavior by terminal device **9102** (e.g., a pattern of repeated or regular non-compliant behavior), communication module **9306** may perform normal scheduling, e.g., according to standard MAC scheduling functions. However, if communication module **9306** identifies non-compliant behavior in terminal device **9102,** communication module **9306** may adjust scheduling for terminal device **9102** (e.g., adjusting a MAC scheduling function), such as in order to address or counteract the non-compliant behavior.

In some aspects, communication module **9306** may compensate for the non-compliant behavior of terminal device **9102** by restricting the radio resources scheduled for terminal device **9102** in **13530.** For example, instead of performing normal scheduling based on BSRs and/or CSI feedback, communication module **9306** may assume that terminal device **9102** is manipulating the BSRs and/or CSI feedback and enforce scheduling decisions based on the assumed manipulation, e.g., by allocating less uplink resources than the BSR would normally require and/or restricting the radio resources compared to if the CSI feedback was accurate. Communication module **9306** may therefore enforce scheduling decisions based on non-compliant behavior in **13530.**

In some aspects, communication module **9306** may restrict scheduling in **13530** only if the non-compliant behavior by terminal device **9102** is expected to harm other terminal devices. For example, if communication module **9306** detects non-compliant behavior by terminal device **9102** in **13520,** communication module **9306** may evaluate whether the non-compliant behavior will harm the radio access network (such as via an evaluation of context information for other terminal devices in the cell). In some aspects, communication module **9306** may evaluate the potential harm to the radio access network via a maximum likelihood framework.

If communication module **9306** determines that the non-compliant behavior of terminal device **9102** will harm the radio access network, communication module **9306** may restrict scheduling for terminal device **9102,** such as by adjusting the radio resource allocation or scheduling. Conversely, if communication module **9306** determines that the non-compliant behavior of terminal device **9102** will not harm the radio access network, communication module **9306** may perform scheduling for terminal device **9102** as requested, e.g., based on the BSRs and/or CSI feedback provided by terminal device **9102.** In some cases, scheduling terminal device **9102** as requested may be beneficial (e.g., of mutual interest) for both network access node **9110** and terminal device **9102** if no harm (or minimal harm) to the radio access network will occur.

In some aspects, communication module **9306** may perform method 13500 for multiple terminal devices and individually enforce scheduling decisions based on whether each terminal device exhibits patterns of non-compliant behavior.

In some aspects, communication module **9306** may therefore utilize past terminal device behavior as input to the scheduling function. In some aspects, communication module **9306** may predict bursty traffic periods based on past behavior of terminal devices and initiate SPS during predicted bursty traffic periods. In some aspects, communication module **9306** may identify traffic patterns based on terminal device behavior and identify non-compliant behavior (e.g., a ’greedy’ terminal device, compared to an ‘honest’ terminal device that exhibits compliant behavior). Communication module **9306** may then enforce scheduling decisions based on non-compliant behavior, such as adjusting scheduling for non-compliant terminal devices to counteract the non-compliant behavior (which may protect the radio access network from non-compliant behavior).

4 QOS

FIG. **136** shows radio communication network **13600** in accordance with some aspects, which may include terminal devices **13602** and **13604** in addition to network access nodes **13610** and **13612.** Although certain aspects of this disclosure may describe certain radio communication network setting (such as e.g., an LTE, UMTS, GSM, other 3rd Generation Partnership Project (3GPP) networks, WLAN/Wi-Fi, Bluetooth, 5G, mmWave, etc.), the subject matter detailed herein is considered demonstrative in nature and may therefore be analogously applied to any other radio communication network. The number of network access nodes and terminal devices in radio communication network **13600** is exemplary and is scalable to any amount.

Accordingly, in an exemplary cellular setting network access nodes **13610** and **13612** may be base stations (e.g., eNodeBs, NodeBs, Base Transceiver Stations (BTSs), etc.) while terminal devices **13602** and **13604** may be cellular terminal devices (e.g., Mobile Stations (MSs), User Equipments (UEs), etc.). Network access nodes **13610** and **13612** may therefore interface (e.g., via backhaul interfaces) with a cellular core network such as an Evolved Packet Core (EPC, for LTE), Core Network (CN, for UMTS), or other cellular core network, which may also be considered part of radio communication network **13600.** The cellular core network may interface with one or more external data networks. In an exemplary short-range setting, network access node **13610** and **13612** may be access points (APs, e.g., WLAN or Wi-Fi APs) while terminal device **13602** and **13604** may be short range terminal devices (e.g., stations (STAs)). Network access nodes **13610** and **13612** may interface (e.g., via an internal or external router) with one or more external data networks.

Network access nodes **13610** and **13612** (and other network access nodes of radio communication network **13600** not explicitly shown in FIG. **136**) may accordingly provide a radio access network to terminal devices **13602** and **13604** (and other terminal devices of radio communication network **13600** not explicitly shown in FIG. **136).** In an exemplary cellular setting, the radio access network provided by network access nodes **13610** and **13612** may enable terminal devices **13602** and **13604** to wirelessly access the core network via radio communications. The core network may provide switching, routing, and transmission of traffic data related to terminal devices **13602** and **13604** and may provide access to various internal (e.g., control nodes, other terminal devices on radio communication network **13600,** etc.) and external data networks (e.g., data networks providing voice, text, multimedia (audio, video, image), and other Internet and application data). In an exemplary short-range setting, the radio access network provided by network access nodes **13610** and **13612** may provide access to internal (e.g., other terminal devices connected to radio communication network **13600**) and external data networks (e.g., data networks providing voice, text, multimedia (audio, video, image), and other Internet and application data). Network access nodes **13610** and **13612** may be network access nodes for any other type of radio access technology and analogously provide a radio access network to proximate terminal devices in this manner.

The radio access network and core network (if applicable) of radio communication network **13600** may be governed by network protocols that may vary depending on the specifics of radio communication network **13600.** Such network protocols may define the scheduling, formatting, and routing of both user and control data traffic through radio communication network **13600,** which includes the transmission and reception of such data through both the radio access and core network domains of radio communication network **13600.** Accordingly, terminal devices **13602** and **13604** and network access nodes **13610** and **13612** may follow the defined network protocols to transmit and receive data over the radio access network domain of radio communication network **13600** while the core network may follow the defined network protocols (e.g., internet protocol) to route data within and outside of the core network. Exemplary network protocols include LTE, UMTS, GSM, WiMAX, Bluetooth, Wi-Fi, mmWave, etc., any of which may be applicable to radio communication network **13600.**

Both the radio access network and core network of radio communication network **13600** may be governed by network protocols that may vary depending on the specifics of radio communication network **13600.** Such network protocols may define the scheduling, formatting, and routing of both user and control data traffic through radio communication network **13600,** which includes the transmission and reception of such data through both the radio access and core network domains of radio communication network **13600.** Accordingly, terminal devices **13602** and **13604** and network access nodes **13610** and **13612** may follow the defined network protocols to transmit and receive data over the radio access network domain of radio communication network **13600** while the core network may follow the defined network protocols to route data within and outside of the core network. Exemplary network protocols include LTE, UMTS, GSM, WiMax, Bluetooth, Wi-Fi, etc., or other 2G, 3G, 4G, 5G, next generation like 6G, etc. technologies either already developed or to be developed, any of which may be applicable to radio communication network **13600.**

FIG. **137** shows an internal configuration of terminal device **13602,** which may include antenna system **13702,** radio frequency (RF) transceiver **13704,** baseband modem **13706** (including physical layer processing module **13708** and controller **13710),** application processor **13712,** memory **13714,** power supply **13716,** sensor **13718,** and sensor **13720.** Although not explicitly shown in FIG. **137,** terminal device **13602** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output devices (display(s), keypad(s), touchscreen(s), speaker(s), external button(s), camera(s), microphone(s), etc.), etc.

In an abridged operational overview, terminal device **13602** may transmit and receive radio signals on one or more radio access networks. Baseband modem **13706** may direct such communication functionality of terminal device **13602** according to the communication protocols associated with each radio access network, and may execute control over antenna system **13702** and RF transceiver **13704** in order to transmit and receive radio signals according to the formatting and scheduling parameters defined by each communication protocol. Although various practical designs may include separate communication components for each supported radio access technology (e.g., a separate antenna, RF transceiver, physical layer processing module, and controller), for purposes of conciseness the configuration of terminal device **13602** shown in FIG. **137** depicts only a single instance of each such components.

Terminal device **13602** may transmit and receive radio signals with antenna system **13702,** which may be a single antenna or an antenna array including multiple antennas and may additionally include analog antenna combination and/or beamforming circuitry. In the receive path (RX), RF transceiver **13704** may receive analog radio frequency signals from antenna system **13702** and perform analog and digital RF front-end processing on the analog radio frequency signals to produce digital baseband samples (e.g., In-Phase/Quadrature (IQ) samples) to provide to baseband modem **13706.** RF transceiver **13704** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **13704** may receive digital baseband samples from baseband modem **13706** and perform analog and digital RF front-end processing on the digital baseband samples to produce analog radio frequency signals to provide to antenna system **13702** for wireless transmission. RF transceiver **13704** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **13706** to produce the analog radio frequency signals for wireless transmission by antenna system **13702.** Baseband module **13706** may control the RF transmission and reception of RF transceiver **13704,** including specifying the transmit and receive radio frequencies for operation of RF transceiver **13704.**

As shown in FIG. **137,** baseband modem **13706** may include physical layer processing module **13708,** which may perform physical layer (Layer 1) transmission and reception processing to prepare outgoing transmit data provided by controller **13710** for transmission via RF transceiver **13704** and prepare incoming received data provided by RF transceiver **13704** for processing by controller **13710.** Physical layer processing module **13708** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Physical layer processing module **13708.** Although not explicitly shown in FIG. **137,** physical layer processing module **13708** may include a physical layer controller configured to control the various hardware and software processing components of physical layer processing module **13708** in accordance with physical layer control logic defined by the communications protocol for the relevant radio access technologies. Furthermore, while physical layer processing module **13708** is depicted as a single component in FIG. **137,** physical layer processing module **13708** may be collectively implemented as separate sections of physical layer processing components where each respective section is dedicated to the physical layer processing of a particular radio access technology.

Terminal device **13602** may be configured to operate according to one or more radio access technologies, which may be directed by controller **13710.** Controller **13710** may thus be responsible for controlling the radio communication components of terminal device **13602** (antenna system **13702,** RF transceiver **13704,** and physical layer processing module **13708)** in accordance with the communication protocols of each supported radio access technology, and accordingly may represent the Access Stratum and Non-Access Stratum (NAS) (also encompassing Layer 2 and Layer 3) of each supported radio access technology. Controller **13710** may be structurally embodied as a protocol processor configured to execute protocol software (retrieved from a controller memory) and subsequently control the radio communication components of terminal device **13602** in order to transmit and receive communication signals in accordance with the corresponding protocol control logic defined in the protocol software.

Controller **13710** may therefore be configured to manage the radio communication functionality of terminal device **13602** in order to communicate with the various radio and core network components of radio communication network **13600,** and accordingly may be configured according to the communication protocols for multiple radio access technologies. Controller **13710** may either be a unified controller that is collectively responsible for all supported radio access technologies (e.g., LTE and GSM/UMTS) or may be implemented as multiple separate controllers where each controller is a dedicated controller for a particular radio access technology or group of technologies, such as e.g., a dedicated LTE controller and a dedicated legacy controller (or alternatively a dedicated LTE controller, dedicated GSM controller, and a dedicated UMTS controller). Regardless, controller **13710** may be responsible for directing radio communication activity of terminal device **13602** according to the communication protocols of the LTE and legacy networks. As previously noted regarding physical layer processing module **13708,** one or both of antenna system **13702** and RF transceiver **13704** may similarly be partitioned into multiple dedicated components that each respectively correspond to one or more of the supported radio access technologies. Depending on the specifics of each such configuration and the number of supported radio access technologies, controller **13710** may be configured to control the radio communication operations of terminal device **13602** in accordance with, e.g., a master/slave RAT hierarchical or multi-SIM scheme.

Terminal device **13602** may also include application processor **13712,** memory **13714,** and power supply **13716.** Application processor **13712** may be a CPU configured to execute various applications and/or programs of terminal device **13602** at an application layer of terminal device **13602,** such as e.g., an operating system (OS), a user interface (UI) for supporting user interaction with terminal device **13602,** and/or various user applications. The application processor may interface with baseband modem **13706** as an application layer to transmit and receive user data such as voice data, audio/video/image data, messaging data, application data, basic Internet/web access data, etc., over the radio network connection(s) provided by baseband modem **13706.**

Memory **13714** may embody a memory component of terminal device **13602,** such as e.g., a hard drive or another such permanent memory device. Although not explicitly depicted in FIG. **137,** the various other components of terminal device **13602** shown in FIG. **137** may additionally each include integrated permanent and non-permanent memory components, such as for storing software program code, buffering data, etc.

Power supply **13716** may be an electrical power source that provides power to the various electrical components of terminal device **13602.** Depending on the design of terminal device **13602,** power supply **13716** may be a 'definite' power source such as e.g., a battery (rechargeable or disposable) or an 'indefinite' power source such as e.g., a wired electrical connection. Operation of the various components of terminal device **13602** may thus pull electrical power from power supply **13716.**

Sensors **13718** and **13720** may be sensors that provide sensor data to application processor **13712.** Sensors **13718** and **13720** may be any of a location sensor (e.g., a global navigation satellite system (GNSS) such as a Global Positioning System (GPS)), a time sensor (e.g., a clock), an acceleration sensor/gyroscope, a radar sensor, a light sensor, an image sensor (e.g., a camera), a sonar sensor, etc.

Terminal devices such as terminal devices **13602** and **13604** of FIG. **136** may execute mobility procedures to connect to, disconnect from, and switch between available network access nodes of the radio access network of radio communication network **13600.** As each network access node of radio communication network **13600** may have a specific coverage area, terminal devices **13602** and **13604** may be configured to select and re-select between the available network access nodes in order to maintain a strong radio access connection with the radio access network of radio communication network **13600.** For example, terminal device **13602** may establish a radio access connection with network access node **13610** while terminal device **13604** may establish a radio access connection with network access node **13612.** In the event that the current radio access connection degrades, terminal devices **13602** or **13604** may seek a new radio access connection with another network access node of radio communication network **13600;** for example, terminal device **13604** may move from the coverage area of network access node **13612** into the coverage area of network access node **13610.** As a result, the radio access connection with network access node **13612** may degrade, which terminal device **13604** may detect via radio measurements such as signal strength or signal quality measurements of network access node **13612.** Depending on the mobility procedures defined in the appropriate network protocols for radio communication network **13600,** terminal device **13604** may seek a new radio access connection (which may be triggered at terminal device **13604** or by the radio access network), such as by performing radio measurements on neighboring network access nodes to determine whether any neighboring network access nodes can provide a suitable radio access connection. As terminal device **13604** may have moved into the coverage area of network access node **13610,** terminal device **13604** may identify network access node **13610** (which may be selected by terminal device **13604** or selected by the radio access network) and transfer to a new radio access connection with network access node **13610.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

FIG. **138** shows an internal configuration of a network access node such as network access node **13610.** As shown in FIG. **138,** network access node **13610** may include antenna system **13802,** radio module **13804,** and communication module **13806** (including physical layer module **13808** and control module **13810).** In an abridged overview of the operation of network access node **13610,** network access node **13610** may transmit and receive radio signals via antenna system **13802,** which may be an antenna array including multiple antennas. Radio module **13804** may perform transmit and receive RF processing in order to convert outgoing digital data from communication module **13806** into analog RF signals to provide to antenna system **13802** for radio transmission and to convert incoming analog RF signals received from antenna system **13802** into digital data to provide to communication module **13806.** Physical layer module **13808** may be configured to perform transmit and receive PHY processing on digital data received from radio module **13804** to provide to control module **13610** and on digital data received from control module **13810** to provide to radio module **13804.** Control module **13810** may control the communication functionality of network access node **13610** according to the corresponding radio access protocols, e.g., LTE, which may include exercising control over antenna system **13802,** radio module **13804,** and physical layer module **13808.** Each of radio module **13804,** physical layer module **13808,** and control module **13810** may be structurally realized as a hardware-defined module , e.g., as one or more dedicated hardware circuits or FPGAs, as a software-defined module, e.g., as one or more processors executing program code defining arithmetic, control, and I/O instructions (e.g., software and/or firmware) stored in a non-transitory computer-readable storage medium, or as a mixed hardware-defined and software-defined module. In some aspects, radio module **13804** may be a radio transceiver including digital and analog radio frequency processing and amplification circuitry. In some aspects, radio module **13804** may be a software-defined radio (SDR) component implemented as a processor configured to execute software-defined instructions that specify radio frequency processing routines. In some aspects, physical layer module **13808** may include a processor and one or more hardware accelerators, wherein the processor is configured to control physical layer processing and offload certain processing tasks to the one or more hardware accelerators. In some aspects, control module **13810** may be a controller configured to execute software-defined instructions that specify upper-layer control functions. In some aspects, control module **13810** may be limited to radio communication protocol stack layer functions, while in other aspects control module **13810** may also be responsible for transport, internet, and application layer functions.

Network access node **13610** may thus provide the functionality of network access nodes in radio communication networks by providing a radio access network to enable served terminal devices to access desired communication data. For example, network access node **13610** may also interface with a core network, one or more other network access nodes, or various other internet networks and servers via a wired or wireless backhaul interface.

Radio communication networks may be highly dynamic due to a variety of factors that impact radio communications. For example, terminal devices **13602** and **13604** may move (e.g., by a user) to various different positions relative to network access nodes **13610** and **13612,** which may affect the relative distances and radio propagation channels between terminal devices **13602** and **13604** and network access node **13610** and **13612.** The radio propagation channels may also vary due to factors unrelated to mobility such as interference, moving obstacles, and atmospheric changes. Additionally, local conditions at terminal device **13602** and **13604,** such as battery power, the use of multiple radio access technologies, varying user activity and associated data traffic demands, etc., may also impact radio communication. Radio communications may also be affected by conditions at network access nodes **13610** and **13612** in addition to the underlying core network, such as network load and available radio resources.

As previously indicated, network access nodes **13610** and **13612** may interface with a core network. FIG. **139** shows an exemplary configuration where network access node **13610** interfaces with core network **13902.** Core network **13902** may provide a variety of functions essential to operation of radio communication network **13600,** such as data routing, authenticating and managing users/subscribers, interfacing with external networks, and various network control tasks. Core network **13902** may therefore provide an infrastructure to route data between terminal device **13602** and various external networks such as data network **13904** and data network **13906;** accordingly, terminal device **13602** may rely on the radio access network provided by network access node **13610** to wirelessly transmit and receive data with network access node **13610,** which may then provide the data to core network **13902** for further routing to external locations such as data networks **13904** and **13906** (which may be packet data networks (PDNs)). Terminal device **13602** may therefore establish a data connection with data network **13904** and/or data network **13906** that relies on network access node **13610** and core network **13902** for data transfer and routing.

Terminal device **13602** may maintain data connections with various different network nodes, including network access node **13610,** various nodes of core network **13902,** and data networks **13904** and **13906,** where each data connection may be a virtual software-level connection referred to as a 'bearer' that is defined by specific network parameters (e.g., guaranteed minimum bitrate, latency requirements, acceptable packet loss rate requirements, etc.) governing the data transfer over the connection. The various bearers may be arranged in hierarchical manner, where higher bearers may utilize lower bearers for to transport data. For example, application processor **13712** may maintain an end-to-end bearer with data network **13904** and an end-to-end bearer with data network **13906.** The end-to-end bearers may each rely on lower bearers to transport data packets. In particular, the end-to-end bearers may be composed of a network bearer and an external bearer, where the network bearer spans between terminal device **13602** across radio communication network **13600** to a network gateway of core network **13902** and the external bearer spans between the network gateway and data network **13904** or data network **13906.** In an LTE setting, the network bearer may be an evolved packet service (EPS) bearer between terminal device **13602** and a PDN gateway (PGW) of core network **13600** while the external bearer may extend between the PGW and data network **13904** or **13906** and include various routers and firewalls. As the network bearer spans across radio communication network **13600,** the network bearer may be composed of multiple lower bearers between network nodes of radio communication network **13600** that the network bearer uses to transfer data packets between each network node. In an exemplary LTE setting, the EPS bearer may be composed of a radio bearer between terminal device **13602** and network access node **13610,** an S1 bearer between network access node **13610** and a serving gateway (SGW) of core network **13902,** and an S5/S8 bearer between the SGW and the PGW, where the radio bearer and the S1 bearer form a radio access bearer (RAB).

Terminal device **13602** may therefore maintain separate end-to-end bearers with data networks **13904** and **13906,** which may each rely on a separate network bearer (e.g., an EPS bearer) for data transfer across radio communication network **13600** and a separate external bearer to transfer data from radio communication network **13600** to data network **13904** or **13906** (where each network bearer and associated external bearer form an end-to-end bearer). In an exemplary use case, application programs executed at application processor **13712** of terminal device **13602** may establish an end-to-end bearer with external data networks such as data networks **13904** and **13906** in order to exchange application data and perform a variety of services, such as web browsing, voice and video calls, multimedia streaming, file downloads, IoT applications, remote machine control applications, and other application-specific data transfer operations such as for email, social networking, and other mobile applications. For example, data network **13904** may be an operator specific network including IP Multimedia Subsystem (IMS) servers while data network **13906** may be an Internet network or server. A first application executed at application processor **13712** may establish a first end-to-end bearer with data network **13904** (e.g., with a counterpart application at data network **13904)** and a second application executed at application processor **13712** may establish a second end-to-end bearer with data network **13906** (e.g., with a counterpart application at data network **13906).** Terminal device **13602** may then utilize the first end-to-end bearer to exchange IMS call data with data network **13904,** such as to make Voice over LTE (VoLTE) calls and may utilize the second end-to-end bearer to exchange Internet web browsing traffic with data network **13906.**

The first and second end-to-end bearers may therefore support different services depending on the connected data networks. As the data traffic profiles for each end-to-end bearer may vary depending on the supported service, the requirements of the end-to-end bearers, and accordingly of each of the lower bearers that compose the end-to-end bearers, may also vary across different services. For example, as the first end-to-end bearer may be utilized for transfer of realtime IMS signaling in the example introduced above, the first end-to-end bearer may have strict latency and acceptable packet-loss requirements in order to ensure that IMS call quality is sufficient. As the second end-to-end bearer may be utilized for 'best-effort' packet data transfer, such as loading websites and other non-realtime traffic, the second end-to-end bearer may have more relaxed latency and acceptable packet-loss requirements. As the end-to-end bearers may utilize lower bearers in the hierarchy to transfer data packets, the bearer requirements of the end-to-end bearers may also be imposed on the underlying bearers (e.g., including the network, and external bearers that form each end-to-end bearer).

As each end-to-end bearer relies on a network bearer to transport data between terminal device **13602** and the network gateways of core network **13902,** radio communication network **13600** may therefore maintain a separate network bearer for each end-to-end bearer. As each end-to-end bearer supports a different underlying service, radio communication network **13600** may need to manage each network bearer in order to meet the requirements of the underlying services. These requirements of each network bearer, referred to as QoS requirements, may specify parameters such as latency, acceptable packet loss, and bitrate guarantees (if any) that are required by each network bearer in order to ensure that transfer of data packets across each network bearer meets the specific requirements of the underlying service. More sensitive or critical services such as IMS calls, realtime voice and video traffic, mission-critical services such as mission-critical push-to-talk (MCPTT) for public safety, and remote machine control services (e.g., autonomous vehicles) may have stricter QoS requirements than other services such as buffered voice/video and best-effort packet data. In order to ensure satisfactory user experience, many communication systems may prioritize data bearers based on the QoS requirements, where network bearers with strict QoS requirements are given higher priority than network bearers with more relaxed QoS requirements. Data traffic for higher priority network bearers may then be prioritized during transfer across radio communication network **13600.** Radio communication network **13600** may therefore give priority to data traffic for high priority network bearers by meeting the strict bitrate, latency, and packet loss requirements of the high priority network bearers. Additionally, if network congestion occurs radio communication network **13600** may discard or delay data traffic for the lowest priority network bearers.

Communication systems such as LTE and other radio access technologies may employ a predefined and standardized QoS framework that classifies and prioritizes network data bearers based on the QoS requirements of the underlying services and regulates data traffic in accordance with the classification and priority of each network bearer. LTE provides an exemplary such framework in the QoS Class Identifier (QCI) mechanism, which classifies network bearers into a number of predefined QCI classes. Each QCI class may be tailored to a specific service type, such as conversational voice and video, IMS signaling data, buffered voice and video, live/realtime voice and video, general packet data (e.g., best-effort), control signaling, etc., and may have specific bitrate guarantees, latencies, and packet loss tolerances. As previously indicated, the QoS classes may be arranged in a hierarchical scheme where each QoS class is assigned a priority, where sensitive services such as IMS signaling data and conversational voice and video may have high priority QCI classes and tolerant services such as buffered streaming and best-effort packet data may have lower priority QCI classes.

In addition to classifying network bearers based on QoS requirements, the QCI framework in LTE may also recognize 'priority' users that subscribe to a premium service that guarantees higher performance. For example, users that wish to be guaranteed high performance guarantees may subscribe to a premium service that guarantees higher QoS to data traffic of that user. Accordingly, the QCI framework may also assign network bearers of these premium users with higher QCI priorities, thus guaranteeing a better QoS to such users. Network bearers for premium users may often be assigned QCI classes with guaranteed bitrates. Other radio communication technologies may also provide standardized QoS frameworks that similarly prioritize certain data streams to ensure that QoS requirements and/or additional subscription guarantees are met.

Radio communication networks may therefore assign each network bearer a QoS class based on a standardized QoS framework that considers the QoS requirements of the underlying service in addition to other considerations such as premium QoS subscriptions. After assigning each network bearer with a QoS class, radio communication networks may then manage data traffic across the radio communication network to ensure that the data of each network bearer is delivered according to the QoS requirements.

Continuing with the setting of FIG. **139,** radio communication network **13600** may assign each network bearer with a QoS class during establishment of the bearer. For example, in an LTE setting, when attaching to the radio communication network **13600** terminal device **13602** may initiate an initial PDN connection with data network **13904** by sending a PDN connectivity request to a Mobility Management Entity (MME) of core network **13902.** As terminal device **13602** is requesting an initial PDN connection with data network **13904** (e.g., terminal device **13602** does not have any other PDN connections with data network **13904),** the MME may establish the network bearer as a 'default' bearer. Before establishing the network bearer, the MME may retrieve subscription data for terminal device **13602** from a Home Subscriber Server (HSS) in core network **13902.** The subscription data may include context information for data network **13904,** which may include an access point name (APN) for data network **13904,** QoS information for data network **13904** including a QCI and an allocation/retention priority (ARP) for the default bearer, and an aggregate maximum bitrate (AMBR) for all non-guaranteed bitrate (non-GBR) bearers which are established for this APN. The subscription data applicable to the PDN connection may depend on the APN for which the application is requesting the default network bearer and additionally on the presence of premium subscription information. For example, certain applications such as IMS applications may require a PDN connection for an APN associated with a higher QCI, AMBR, and/or ARP than other applications (which may result in default bearers with higher QCI, AMBR, and/or ARP) while certain subscribers may have premium subscriptions (which may result in default bearers with higher QCI, AMBR, and/or ARP).

The MME may then establish the network bearer across radio communication network **13600** with the QCI, AMBR, and ARP (which may involve a propagating sequence of messages across the various network nodes of radio communication network **13600** to establish the underlying data bearers). The PGW of core network **13904** that interfaces with data network **13904** may then establish an external bearer in order to complete the end-to-end data bearer supporting the PDN connection with data network **13904.** Terminal device **13602** and the PGW may then map uplink and downlink data onto the network bearer using the TFT information, which specifies packet filters for identifying data packets that belong on the network bearer. Terminal device **13602** may also establish additional PDN connections with other data networks, such as data network **13906,** by sending additional PDN connectivity requests.

As this network bearer is a default network bearer, the QoS requirements of the assigned QCI may be relatively low. For example, default bearers in LTE may generally be assigned QCI=9, which is intended for standard 'best-effort' data traffic. As an exception to this, the default bearer for a PDN connection for IMS services may be assigned QCI=5 so that it fulfills the high QoS requirements for IMS signaling data. If terminal device **13602** needs different QoS requirements for a given service with data network **13904** (such as voice/video/audio/multimedia streaming), terminal device **13602** may need to establish a dedicated network bearer with data network **13904** that has a different QCI than the default network bearer. Terminal device **13602** may determine the QoS requirements for the dedicated network bearer based on the requesting application or service. Accordingly, terminal device **13602** may transmit a bearer resource allocation request to the MME that specifies a QCI and TFT information for the requested dedicated bearer resources (in addition to other bearer parameters such as a guaranteed bitrate (GBR) and maximum bitrate (MBR) if the requested dedicated bearer is a GBR bearer). The MME may then carry out dedicated bearer establishment in radio communication network **13600** (which may involve a propagating sequence of messages across the various network nodes of radio communication network **13600** to establish the underlying data bearers in addition to verifying the QCI information). Radio communication network **13600** may then establish the dedicated network bearer (although if there is another dedicated network bearer between terminal device **13602** and data network **13904** with the same QCI, radio communication network **13600** may 'add' bearer resources to the existing dedicated network bearer, e.g., increase the GBR and MBR accordingly, and map data from the existing and the requested dedicated network bearer onto the existing dedicated network bearer). The PGW of core network **13904** that interfaces with data network **13904** may then establish an external bearer for the dedicated network bearer in order to complete the end-to-end data bearer supporting the PDN connection with data network **13904**

Terminal device **13602** may then utilize the default and dedicated network bearers to exchange data with data network **13904,** where terminal device **13602** may map and receive certain data of the PDN connection on the default network bearer and other data on the dedicated network bearer. For example, in an IMS application, the default network bearer may be utilized for IMS signaling while the dedicated network bearer may be utilized for IMS call traffic. The dedicated network bearer may be a GBR bearer (e.g., QCI=1) in contrast to the default network bearer which is non-GBR (e.g., QCI=5); consequently, the dedicated network bearer may be more suitable for delivering IMS call traffic across radio communication network **13600.** As indicated above, terminal device **13602** and the PGW of core network **13902** interfacing with data network **13904** may be responsible for mapping the appropriate data packets onto the proper network bearer according to the TFT filters. The various nodes of radio communication network **13600** may then deliver the data packets across radio communication network **13600** by enforcing the QoS requirements of each network bearer (which may include e.g., admission control, scheduling, rate control, etc. across each of the lower bearers that compose each network bearer (e.g., the radio bearer, S1 bearer, and S5/S8 bearer that form an EPS network bearer in LTE)). Dedicated network bearer establishment may also be triggered by radio communication network **13600** as opposed to by terminal device **13602.**

Accordingly, in the setting of FIG. **136,** terminal device **13602** may establish a first default network bearer for data network **13904** and a second default network bearer for data network **13906.** Depending on the needs of the underlying services provided by data networks **13904** and **13906,** terminal device **13602** may also establish dedicated network bearers to deliver data traffic with other QoS requirements. Each default and dedicated bearer may be assigned a QoS class with specific QoS requirements, where the QoS class may be determined by radio communication network **13600** or terminal device **13602.** Radio communication network **13600** may then oversee data transfer for the various default and dedicated network bearers between terminal device **13602** and the network gateways at the back end of core network **13902** according to the QoS requirements specified by the respective QoS classes.

Maintaining and optimizing QoS requirements for the various bearers in radio communication networks may help provide a satisfactory user experience, and in some cases may be important in providing satisfactory user experience. It may therefore be important that the various nodes of radio communication network **13600** carry out their respectively assigned QoS responsibilities in order that data traffic on each network bearer is handled according to the priority, latency, packet loss, and bitrate guarantees of the respective QoS class. While existing QoS frameworks may uphold QoS requirements in many cases, further improvements in QoS guarantees may be invaluable in maximizing user experience. Various aspects of this disclosure may therefore provide various mechanisms to improve, or in some cases to optimize, QoS in radio communication networks in order that the QoS requirements for various applications and services are met.

4.1 QoS #1

In some aspects of this disclosure, a radio communication network may perform network slice selection for a terminal device to use based on the QoS requirements of the various applications of the terminal device. In particular, a management application may identify which applications are installed on the terminal device and/or which applications are frequently used by a user and evaluate the QoS requirements of the identified applications and associated services to determine a 'service profile key' that characterizes the collective QoS requirements of the applications of the terminal device. The radio communication network may then utilize the service profile key to select a suitable network 'slice' for the terminal device to utilize. As will be detailed, in network slicing architectures the infrastructure of a single network may be logically divided into multiple separate network 'slices' that each form a virtual end-to-end network that is tailored to support specific services based on the resources logically assigned to each slice. These aspects may be used with power efficiency aspects described herein.

Aspects in the '5G' class may utilize such network slicing in order to meet the requirements of a number of different services (e.g., mobile broadband, massive IoT, remote machine control, etc.) with a single physical network. Accordingly, instead of providing a common radio access and core network for all terminal devices to use, these advanced networks may divide the radio access and core network into separate logical 'slices' that each implement a virtual end-to-end network. Each network slice may then be allocated dedicated resources tailored to meet certain network parameters such as latency, reliability, mobility, charging, security, data rate, policy control, power consumption, battery life, capacity, coverage, etc., in order to effectively support certain services. For example, a first network slice of a given network may target mobile broadband uses while a second network slice of the network may target massive IoT applications. The first network slice may therefore be configured to offer higher data rates and mobility with lower latency while the second network slice may offer lower power consumption while also supporting lower mobility. Alternatively, the network may have fine-grained network slices and e.g., may have multiple mobile broadband slices that are each configured to support specific types of mobile broadband traffic, such as a network slice for video delivery and another network slice for web browser traffic. All variations of such network slice configurations are within the scope of this disclosure.

Each network slice may therefore be tailored (e.g., by virtue of the assigned resources) to support specific services on account of the parameters (latency, reliability, mobility, charging, security, data rate, policy control, power consumption, capacity, coverage, etc.) specific to each network slice. Despite the flexibility offered by such slicing, the allocation of terminal devices to different slices may generally be fixed. For example, IoT devices employed in a massive IoT deployment, such as for a sensor network, may be assigned to a massive IoT network slice while user-operated terminal devices such as mobile phones and tablets may be assigned to a mobile broadband network slice.

However, depending on the services offered by a terminal device, this fixed slice assignment may not be applicable in many use cases. Accordingly, the current aspects may aggregate the QoS requirements of the applications and related services of a given terminal device to determine a service profile key that collectively characterizes the QoS requirements of the terminal device. These aspects may then apply the service profile key to select an ideal network slice to support the data traffic for the terminal device. This may therefore improve (e.g., optimize) data transfer for terminal devices by selecting a network slice that fits the QoS requirements of the terminal device. These aspects can also provide a mechanism to adapt to changes in the usage of the terminal device by updating the service profile key when the application and service usage changes.

FIG. **140** shows an exemplary network slicing architecture for radio communication network **14000.** As shown in FIG. **140,** radio communication network **14000** may physically include radio infrastructure **14002,** baseband infrastructure **14004,** and core infrastructure **14006,** where radio infrastructure **14002** and baseband infrastructure **14004** may form the radio access section of radio communication network **14000.** Radio infrastructure **14002** may include antennas and radio circuitry (e.g., in the manner of antenna system **13802** and radio module **13804** of network access node **13610** as shown in FIG. **138)** that may transmit and receive radio signals with terminal devices over the radio access network of radio communication network **14000.** The antennas and radio circuitry of radio infrastructure **14002** may be geographically deployed throughout the coverage area to provide the radio access network to proximate terminal devices. Baseband infrastructure **14004** may handle the baseband processing section of the radio access network (e.g., in the manner of baseband module **13810** of network access node **13804).** However, instead of having separate baseband processing instances at network access node site locations, baseband infrastructure **14004** may implement the baseband processing of the radio access network in centralized locations, such as in a software-defined architecture executed at central servers (which may be commercial cloud servers) that may optionally be supported by dedicated baseband hardware (e.g., hardware accelerators). Core network system **14006** may handle the core network functionality of radio communication network **14000** (e.g., in the manner of core network **13902** as shown in FIG. **139)** and, similarly to baseband infrastructure **14004,** may be implemented in a software-defined architecture on central servers. Although shown as single components in FIG. **140,** in some aspects baseband infrastructure **14004** and core infrastructure **14006** may be implemented in a cloud architecture and may thus be spread across different physical servers, such as with network virtualization techniques. Core network **14000** may interface with external data networks such as data networks **14014** and **14016.**

Instead of supporting all terminal devices with a single, monolithic architecture, radio communication network **14000** may be divided into network slices **14008, 14010,** and **14012.** As shown in FIG. **140,** network slices **14008-14012** may be formed from radio infrastructure **14002,** baseband infrastructure **14004,** and core infrastructure **14006** and may each provide an end-to-end network path across radio communication network **14000.** As previously indicated, each network slice may be a logically separate 'virtual' network with dedicated resources and accordingly may offer a virtually different radio access and core network. As baseband infrastructure **14004** and core infrastructure **14006** may be implemented on central servers, in some aspects each of network slices **14008-14012** may be implemented using network virtualization such as network function virtualization (NFV) in which the various baseband and core network functions are embodied as software and executed separately on the servers that support baseband infrastructure **14004** and core infrastructure **14006.** For example, core network functions such as MME, PGW, SGW, and PCRF may be embodied in software and installed onto the servers supporting core infrastructure **14006.** In some aspects baseband processing functions, such as those related to Digital Units (DUs) in an LTE cloud-RAN (C-RAN) architecture may similarly be embodied as software and installed onto the servers supporting baseband infrastructure **14004.** As previously indicated, baseband infrastructure **14004** can optionally also be implemented in part with dedicated baseband hardware, such as dedicated circuitry referred to as hardware accelerators that are specifically designed to perform processing-intensive physical layer operations. In order to realize the different network slicing for network slices **14008-14012,** multiple instances of the core network and baseband processing functions may be installed and executed as software on baseband infrastructure **14004** and core infrastructure **14006** in order to realize each of network slices **14008-14012,** such as by using a virtual machine framework. Any dedicated baseband hardware may also be shared between network slices or duplicated and uniquely assigned to each network slice. In some aspects, the various subcomponents (e.g., virtual machines) that constitute each network slice may then be connected with networking techniques such as software defined networking (SDN) in order to logically realize each of network slices **14008-14012.**

As indicated above, radio infrastructure **14002** may be implemented using geographically deployed antenna and radio circuitry nodes. The equipment of radio infrastructure **14002** dedicated to each of network slices **14008-14012** may overlap (e.g., network slices **14008 -14012** may utilize the same antenna and radio circuitry of radio infrastructure **14002)** or may be separate (e.g., each of network slices **14008-14012** may utilize different antenna and radio circuitry of radio infrastructure **14002).**

The network slicing of radio communication network **14000** may provide greater flexibility and service-specific resources. For example, network slice **14008** may be tailored for mobile broadband (MBB), network slice **14010** may be tailored for massive Machine Type Communication (mMTC), and network slice **14012** may be tailored for ultra-reliable low-latency communication (URLLC). The individual differences between MBB vs. mMTC vs URLLC traffic will be reflected in the configuration and deployment of network slices **14008-14012.** For example, MBB is generally the continuation of the past evolution from e.g., UMTS to LTE to LTE-A, which targets higher throughputs with greater numbers and higher efficiency of channels. MBB slices such as network slice **14008** will be expected to support download of substantial amounts of data with high throughput, which may require specialized hardware that is optimized for user-plane throughput. However, this specialized hardware may not necessarily support low-latency (e.g., for a quick start of data transfer), and at least in the near future the highest targeted data rates (e.g., 10 Gbps in the uplink and 20 Gbps in the downlink) may not be required by many subscribers. MBB slices may also target support of a high degree of mobility due to the mobile nature of many MBB terminal devices.

For mMTC applications, the ratio between the amount of signaling (e.g., control) and user data transferred is definitively shifted towards signaling data. Accordingly, mMTC slices such as network slice **14010** will be expected (e.g., at both hardware and software components) to handle many simultaneous access attempts in parallel. Although the lifetime of a specific connection may be relatively short (and the amount of user data transferred relatively small). mMTC slices may also be expected to support terminal devices under extreme (e.g., extremely poor) coverage conditions which may require special protocols (e.g., at PHY and Layer 2) that proved additional redundancy. Due to the added redundancy, these special protocols will most likely not be very efficient, in particular in terms of spectral efficiency. In some cases, the mobility demands for mMTC slices may be less than that of MBB, in particular for stationary IoT device networks such as fixed sensor networks.

URLLC slices such as network slice **14012** may be configured with special hardware in order to achieve the low-latency needed to support URLLC devices. URLLC slices may in some cases also target high throughput, although potentially for only very short durations of time as the amount of data that needs to be transferred may be relatively small (e.g., in the order of several hundred octets). Due to the high reliability requirements, some additional redundancy may also be required. However, in this case the redundancy/error resilience may not be able to be met by distributing the information over time (e.g., by repeating transmissions, which may unacceptably impact latency), and accordingly transmissions may be repeated by, for example, transmitting simultaneously on several frequency bands. This may lead to lower spectral efficiency in URLLC slices compared to MBB slices. In certain cases the mobility demands of URLLC slices may also be higher than mMTC slices, such as for autonomous driving applications.

Accordingly, the different demands and targets of network slices **14008-14012** may lead to different configurations and resources. For example, network slices **14008-14012** may require different specialized hardware and/or hardware accelerators to support the extreme use cases unique to each network slice. As this hardware is expensive and likely a scarce resource, networks may aim to only assign terminal devices to each network slice that have a real need for the properties (latency, reliability, throughput, mobility) offered by each slice. Although MBB, mMTC, and URLLC may be referred to for network slices **14008-14012,** in some aspects radio communication network **14000** may also be configured with more or fewer network slices that may support other services.

Network slicing may be relatively fixed in assigning terminal devices to network slices. For example, terminal devices may be classified based on an overall service type, e.g., MBB terminal devices, massive MTC terminal devices, URLLC terminal devices, etc., and may be rigidly fixed to a corresponding network slice. The network may assign this service type, e.g., based on specific capabilities of the terminal device (e.g., maximum supported bitrate, minimum supported transmission time interval (TTI), support of device-to-device (D2D) communication) or based on the subscription. In the latter case the subscriber could be responsible for inserting the universal subscriber identity module (USIM) representing the subscription in a terminal device with capabilities suitable for the service type.

These aspects may therefore present greater flexibility and improve, or in some cases optimize, QoS with a framework that characterizes the services and applications of a terminal device (e.g., installed and/or frequently-used applications) as a service profile key. The terminal device may then signal the service profile key to a network, which may assign the terminal device to a particular network slice that best meets the QoS requirements indicated by the service profile key. As the services and applications of the terminal device may change over time, in some aspects the terminal device may update the service profile key and therefore enable the network to switch the assigned network slice in order to dynamically improve, or in some cases optimize, the QoS of data transfer for the terminal device.

FIG. **141** shows an exemplary internal diagram of terminal device 13602 according to some aspects. As shown in FIG. **141,** application processor **13712** may include manager application **14102** and one or more dedicated applications **14104-14106**. Other components of terminal device **13602** not directly related to the current aspects in addition to control, power, and clock lines may not be expressly shown in FIG. **141.** In some aspects, manager application **14102** and dedicated applications **14104-14106** may each be embodied as software logic stored in a non-transitory computer readable medium that is retrieved and executed by application processor **13712.** Each of manager application **14102** and dedicated applications **14104-14106** may each be stored as separate program code modules that may be separately executed by application processor **13712.** Dedicated applications **14104-14106** may be any of a number of various types of applications, such as voice/video call applications, web browser applications, email applications, messaging applications, social media applications, navigation applications, calendar/scheduling applications, IoT applications, mMTC applications, remote machine control applications, autonomous driving applications, etc. In some aspects, application processor **13712** may also interact with other components of terminal device **13602** to make dedicated applications **14104-14106** user-interactive, such as with user I/O components e.g., a display screen, audio speakers, touchpads, microphones, cameras, and buttons.

Dedicated applications **14104-14106** may be 'online' applications that require exchange of data traffic with data networks. Accordingly, in a setting where terminal device **13602** is connected to radio communication network **14000,** dedicated application **14104** may establish and maintain a software-level logical connection with data network **14014** while dedicated application **14106** may establish and maintain a software-level logical connection with data network **14016.** As previously indicated, the software-level logical connections between application processor **13712** and data networks **14014** and **14016** may include various data bearers that perform transfer of data packets between terminal device **13602** and data networks **14014** and **14016.** In the same manner as detailed above regarding radio communication network **13600,** radio communication network **14000** may utilize network bearers to transfer data across radio communication network **14000,** which may include both default and dedicated network data bearers. However, as each of network slices **14008-14012** utilize dedicated resources with unique traffic characteristics (e.g., latency, reliability, mobility, charging, security, data rate, policy control, power consumption, capacity, coverage, etc.), the network bearers provided by each network slice may inherit the characteristics of the underlying network slice at least to some extent. For example, if network slice **14010** is an mMTC slice as introduced above, network slice **14010** may not be able to provide a low latency and high throughput network bearer that would be sufficient to deliver e.g., IMS signaling or various other types of MBB traffic. Similarly, network slices **14008** and **14012** may not be capable of supporting the sizable number of network bearers as would be needed for mMTC due to their respective aims for MBB and URLLC traffic. In a more fine-grained deployment, e.g., where radio communication network **14000** provides multiple network slices for certain services such as multiple different mobile broadband network slices, certain network slices also may be better suited to transferring certain types of data traffic, such as a low-latency MBB network slice for delivering IMS signaling and a high throughput MBB network slice for file download.

Manager application **14102** may be configured to evaluate which applications are installed on and/or frequently used by application processor **13712,** such as by monitoring the usage of dedicated applications **14104-14106,** and determine a 'service profile key' based on the QoS requirements of the installed/frequently used applications. Manager application **14102** may then provide the service profile key to radio communication network **14000** (e.g., to a core network entity of core infrastructure **14006),** which may then select an appropriate network slice for terminal device **13602** by identifying which network slice is best configured to meet the QoS requirements collectively represented by the service profile key. Terminal device **13602** may then utilize the network slice selected by radio communication network **14000** to establish network bearers and exchange data traffic with data networks **14014** and **14016.**

FIG. **142** shows message sequence chart **14200** according to some aspects. As shown in FIG. **142,** manager application **14102** may first identify installed and/or frequently-used applications of application processor **13712** in **14202.** For example, manager application **14102** may identify applications that are currently installed on application processor **13712,** which may include dedicated applications **14104-14106.** As these aspects may improve QoS for data activity, in some aspects manager application **14102** may only identify applications that are 'online', e.g., that utilize data transfer over radio communication network **14000.** Additionally or alternatively, in some aspects manager application **14102** may determine which applications are frequently-used, such as by monitoring application usage at application processor **13712** over time according to a predetermined criteria, for example, applications that are used for more than a predefined duration in a given time window (which may also be average values) or applications that transfer more than a predefined amount of data in a given time window (which may be average values).

After identifying the relevant applications, e.g., dedicated applications **14104-14106,** manager application **14102** may evaluate the QoS requirements of the identified applications in order to determine a service profile key in **14204.** The service profile key may therefore collectively characterize the QoS requirements of the applications of terminal device **13602** that are involved in data transfer. As each of the identified applications may utilize specific services provided by the associated data networks, such as voice/video calls, web browser traffic, email, IoT, remote machine control, etc., each of the identified applications may rely on network bearers that meet the QoS requirements of the underlying services. For example, each of the applications identified by manager application **14102** in **14202** may have latency, reliability, mobility, charging, security, data rate, policy control, power consumption, battery life, capacity, or coverage requirements that a network bearer should meet in order to provide sufficient service. Manager application **14102** may collect these QoS requirements each identified application and determine a service profile key that jointly characterizes the QoS requirements of the identified applications.

Manager application **14102** may collect the QoS requirements of the identified applications in **14202** in several different ways. For example, as detailed above terminal device **13602** may be configured to request a dedicated network bearer (e.g., with a bearer resource allocation request in an LTE setting) with a specific QoS class from core infrastructure **14006.** Terminal device **13602** may determine the desired QoS class for a dedicated network bearer based on a mapping table that maps the various applications of application processor **13712** to a specific QoS class (where each QoS class has specific QoS requirements including latency, bitrate, packet loss, and priority requirements). For example, in an exemplary scenario, dedicated application **14104** may request an IP connection with data network **13904.** Application processor **13712** may provide the request to baseband modem **13706** and may specify a unique 'application ID' for dedicated application **14104,** where the application ID is a predefined number or string that uniquely identifies dedicated application **14104.** Controller **13710** may then reference a mapping table with the application ID for dedicated application **14104** to determine if the mapping table includes an explicit mapping rule for dedicated application **14104.** In some aspects, the explicit mapping rule may be, for example, a rule that specifies a QoS class that should be utilized for dedicated network bearers requested by dedicated application **14104** and that may be different from the QoS class of the default network bearer. If the mapping table does not have an explicit mapping rule for a given application (e.g., there are no entries in the mapping table with the application ID of the application), controller **13710** may utilize a default QoS class and map the data packets for application **14104** onto the default network bearer for data network **13904.**

In some aspects, manager application **14102** may therefore utilize the mapping table (e.g., used for assigning QoS classes to dedicated bearers based on application IDs) to collect the QoS requirements of the applications identified in **14202.** For example, manager application **14102** may identify the application IDs for the applications identified in **14202** and reference the mapping table to determine if any of the identified applications have an explicit mapping rule (with an associated QoS class) in the mapping table. Manager application **14102** may utilize the QoS class specified in the mapping table for each identified application with an explicit mapping rule and may utilize a default QoS class (for default network bearers) for each identified application that does not have an explicit mapping rule. As previously indicated, each QoS class may be assigned specific QoS requirements. For example, each QoS class may be part of a standardized QoS framework (e.g., QCI in LTE) and may be mapped to predefined QoS requirements.

In some aspects, the mapping table utilized for QoS class assignment may be provided by core infrastructure **14006.** For example, a dedicated network server (e.g., an Open Mobile Alliance (OMA) device management server) in core infrastructure **14006** may store the mapping table and may provide the mapping table to terminal devices (e.g., as an OMA Managed Object (MO)), e.g., after each terminal device has initially attached to core infrastructure **14006.** In some aspects, the dedicated network server may also provide updates to the terminal devices if the mapping table changes. Accordingly, manager application **14102** may utilize the network-provided mapping table in **14204** in order to identify the QoS requirements of each of the identified applications. As this mapping table is provided by the network, this mapping table may also be considered 'operator-defined'.

Alternatively, in some aspects manager application **14204** may 'override' the network-provided/operator-defined mapping table with an alternate mapping table. The alternate mapping table may specify QoS requirements for certain applications that are different from the QoS requirements mapped to each application by the network-provided mapping table. The alternate mapping table may optionally also be specific to these aspects, in other words, may be specifically provided to define QoS requirements in accordance with these aspects. In some aspects, the alternate mapping table may be preprogrammed into terminal device **13602** or may be received by terminal device **13602** from an alternate location, such as an external server (not part of radio communication network **13600)** that provides the alternate mapping table to terminal device **13602.**

Similar to the network-provided mapping table, in some aspects the alternate mapping table may be indexed with application IDs and may define QoS requirements for each application ID. Accordingly, if manager application **14102** utilizes the alternate mapping table in **14204,** manager application **14102** may reference the alternate mapping table with the application IDs of the applications identified in **14202** and determine the QoS requirements mapped to each identified application in the alternate mapping table. In some aspects, terminal device **13602** may also utilize the alternate mapping table to establish data bearers and may accordingly override the network-provided mapping table for bearer establishment purposes.

In some aspects, manager application **14102** may utilize other information to identify the QoS requirements for dedicated applications **14104-14106.** For example, dedicated applications **14104-14106** may be pre-assigned metadata that indicates their QoS requirements. For example, if dedicated application **14104** is an application focused on mMTC use cases, dedication application **14104** may have preassigned metadata that is consistent with QoS requirements for mMTC applications (and likewise for MBB and URLLC cases). Manager application **14102** may also access this preassigned metadata for dedicated applications **14104-14106** to identify their QoS requirements.

After identifying the QoS requirements of the identified applications, manager application **14102** may determine a service profile key based on the QoS requirements. The service profile key may characterize the QoS requirements of the identified applications. In some aspects, the service profile key may therefore provide a characterization of the latency, reliability, mobility, charging, security, data rate, policy control, power consumption, battery life, capacity, and/or coverage requirements of the applications of terminal device **13602,** which may provide a basis for identifying an appropriate network slice of radio communication network **14000** to assign to terminal device **13602.** While applications of application processor **13712** may still utilize separate network bearers across the selected network slice (where the network bearers are configured according to the individual QoS requirements of the applications), selection of an ideal network slice that fits the QoS requirements of the applications may be more effective than attempting to maintain a network bearer with QoS requirements that are not compatible with the supporting network slice.

In various aspects, manager application **14102** may have different options for determining the service profile key (which may in some cases also require cooperation from core infrastructure **14006).** For example, in some aspects manager application **14102** and core infrastructure **14006** may utilize an existing QoS framework as the service profile keys. In this case, manager application **14102** may determine a QoS class from the standardized QoS framework (e.g., QCI in LTE) that best matches the QoS requirements of the identified applications. In some aspects, manager application **14102** may compare the QoS requirements of each identified application to the QoS requirements of each standardized QoS class to determine which standardized QoS class is the 'closest' (e.g., by a multi-variable distance measurement, which may also weight certain QoS requirements higher than others) overall to the QoS requirements of the identified applications. Alternatively, in some aspects manager application **14102** may identify the dedicated application with the strictest QoS requirements and utilize the corresponding QoS class as the service profile key. In either case, manager application **14102** may then report the selected QoS class as the service profile key to core infrastructure **14006** in **14206,** which may then utilize the selected QoS class to perform network slice selection.

Alternatively, in some aspects manager application **14102** and core infrastructure **14006** may utilize a different service profile key scheme, such as a service profile key scheme that is specific to these aspects. For example, the service profile key scheme may be predefined and specify a set of predefined service profile keys that are each assigned different QoS requirements. Similarly to the above case with standardized QoS frameworks, manager application **14102** may compare the QoS requirements of the identified applications to each of the predefined service profile keys in **14204** to determine which of the predefined service profile keys provides the best match (e.g., by applying a multi-variable distance measurement to the QoS requirements and the predefined service profile keys to determine which predefined service profile key has the least distance with the QoS requirements). Manager application **14102** may then report the closest predefined service profile key to core infrastructure **14006** in **14206,** which may then utilize the closest predefined service profile key to perform network slice selection.

In some aspects, manager application **14102** may also determine the service profile key based on a usage profile, such as how often and/or at what times or days a particular application is used, of dedicated applications **14104-14106**. For example, dedicated application **14104** may be used very often (e.g., by a user of terminal device **13602)** while dedicated application **14106** may only be used sporadically or infrequently. As dedicated application **14104** may therefore be used more frequently than dedicated application **14106,** in some aspects manager application **14102** may weight the service profile key towards the QoS requirements of dedicated application **14104** (e.g., by weighting the QoS requirements of dedicated application **14104** with a higher weight than QoS requirements of other applications in a multi-variable distance measurement with the predefined service profile keys). In another example, dedicated application **14106** may be used frequently during certain times of day or days of the week (such as during work hours or during work days) and rarely during other times of day or days of the week. Accordingly, in some aspects manager application **14102** may identify the times/days when dedicated application **14106** is most frequently used and determine the service profile key to more heavily reflect the QoS requirements of dedicated application **14106** during times/days of the week that dedicated application **14106** is used and to less heavily reflect the QoS requirements of dedicated application **14106** during other times/days. In some aspects, manager application **14102** may determine the usage profile based on location and movement of terminal device **13602,** such as where a user may be more likely to use maps when away from frequently visited areas and when moving at car speeds. In some aspects, manager application **14102** may determine the usage profile from social network information, such as where a user of terminal device **13602** is at an event where many other users are tweeting, live streaming, and other social actions. Manager application **14102** may then adjust the usage profile accordingly if the user is likely to do the same. In some aspects, manager application **14102** may determine the usage profile based on data in other applications, such as calendar appointments in a calendar or email application. In some aspects, manager application **14102** may determine the usage profile based on information about access to Wi-Fi services, such as if terminal device **13602** is near a Wi-Fi hotspot that the user has used before (e.g., if a user subscribes to a particular network and is going to an event with a hotspot of that network). Manager application **14102** may then adjust the usage profile accordingly.

In some aspects, manager application **14102** may also determine the service profile key in **14204** based on a 'target', such as a service optimization target (e.g., optimized QoS), cost optimization target (e.g., the lowest cost service), or battery usage optimization target (e.g., the lowest battery power consumption), or a cost optimization target (e.g., the lowest cost). For example, low latency or high bitrate may provide improved service but come at the expense of higher cost (e.g., if the operator has a traffic-dependent charging policy) and higher power consumption. Accordingly, if there is currently low battery power at terminal device **13602** or if a user sets terminal device **13602** in a power saving mode, manager application **14102** may in some aspects utilize a power consumption optimization target and assign QoS classes to the identified applications that improve, or even optimize, battery power consumption (potentially at the expense of service). Alternatively, if a trigger at terminal device **13602** indicates that service should be improved or optimized (which may be initiated by a user or by another trigger), in some aspects manager application **14102** may utilize a service optimization target and assign QoS classes to the identified application that improve or optimize service (potentially at the expense of cost and power consumption). Alternatively, if a trigger at terminal device indicates that cost should be improved or optimized (such as a billing for terminal device **13602** approaching a limit or cap or a user indicating a desire to reduce or minimize cost), in some aspects manager application **14102** may utilize a cost optimization target and assign QoS classes to the identified application that improve or optimize cost (potentially at the expense of service).

Manager application **14102** may therefore consider such targets during service profile key determination in **14204.** For example, manager application **14102** may have several different alternate mapping tables (for mapping application ID to QoS requirements) where each alternate mapping table has QoS requirements that are tailored to one of the specific targets. For example, a first alternate mapping table tailored for a cost reduction or optimization target may have specific QoS requirements for each application while a second alternate mapping table tailored for a service improvement or optimization target may have specific different QoS requirements for each application. The QoS requirements of the first alternate mapping table may be tailored to reducing or optimizing cost while the QoS requirements of the second alternate mapping table may be tailored to improving or optimizing service. If a specific target is desired, manager application **14102** may therefore utilize the corresponding alternate mapping table to obtain the QoS requirements of the identified application. Manager application **14102** may then determine the service profile key based on these QoS requirements, which may cause the service profile key to reflect the target.

Alternative to using different alternate mapping tables, in some aspects manager application **14102** may modify the service profile key based on an improvement or optimization target. For example, manager application **14102** may first determine a service profile key based on the QoS requirements in **14204,** modify the service profile key (which may include selecting a different service profile key that better meets the target), and transmit the modified service profile key to core infrastructure **14006** in **14206.** Manager application **14102** may therefore select the service profile key based on an improvement or optimization target.

Additionally or alternatively, in some aspects manager application **14102** may utilize a points scheme to determine the service profile key. For example, manager application and core infrastructure **14006** may utilize a set of predefined classes for each of the network slice dimensions, e.g., MBB, mMTC, and URLLC dimensions. Based on the requirements of dedicated applications **14104-14106,** manager application **14102** may tally points for each network slice dimension to obtain a final point count for each network slice dimension that indicates which network slice dimension represents the best match for dedicated applications **14104-14106** (e.g., on the basis of a collective match or a match for the most extreme requirements). For example, as MBB places a high demand on throughput, manager application **14102** may assign 1 point to the MBB dimension for a dedicated application with a throughput requirement of [0 - 100 Kbit], 2 points for [100 Kbit - 1 Mbit], 3 points for [1 Mbit - 100 Mbit], 4 points for [100 Mbit - 1 Gbit], and 5 points as [1 Gbit - 100 Gbit]. For the mMTC dimension, manager application **14102** may assign 1 point for enhanced coverage and 2 points for 'extreme' enhanced coverage, add 1 to 3 points based on power restrictions (1 point for up to 1 week, 2 points for up to 5 years, 3 points for 10 years and more of operation without re-charging), add 1 point for 'infrequent' transmission of small data packets, and/or add up to 2 points for the support of 3GPP Cellular IoT (CIoT) optimizations. For the URLLC dimension, manager application **14102** may assign 1 or 2 points if the supported TTI is < 0.5 ms or 0.1 ms, respectively, and up to 3 additional points dependent on whether the packet error loss rate needs to be < 10^-6, 10^-8, 10^-10, respectively. In some aspects, manager application **14102** may tally the points for each of dedicated applications **14104-14106** to obtain a total point count for each dimension that includes the points from each of dedicated applications **14104-14106.** In some aspects, manager application **14102** may shift or alter the point counts for each network slice dimension based on one or more factors noted above, such as usage profiles or optimization targets. This point scheme is non-limiting and demonstrative and numerous other point schemes relying on the same concept can be used without departing from the scope of this disclosure.

Manager application **14102** may then select the service profile key based on the point counts for each of the network slice dimensions. For example, in an aspect where the service profile key indicates a network slice dimension, manager application **14102** may select a service profile key that indicates the network slice dimension with the highest point count. For example, if the point count for the MBB dimension is 4, the point count for the mMTC dimension is 1, and the point count for the URLLC dimension is 2, manager application **14102** may select the service profile key as corresponding to the MBB dimension. Alternatively, in some aspects manager application **14102** may compile or combine the point counts for the network slice dimensions and send the point counts as the service profile key, which may enable core infrastructure **14006** to evaluate the point counts to select a network slice. For example, in some aspects manager application **14102** may encode the result in a 3-dimensional vector. For example, if each dimension the device can achieve between 0 and n-1 points, one could set service profile key = (# of MBB points) * n^2 + (# of mMTC points) * n + (# of URLLC points).

In each case, the service profile key selected by manager application **14102** in **14204** may provide a characterization of the requirements of the applications of terminal device **13602.** The service profile key may therefore provide a basis for identifying an appropriate network slice of radio communication network **14000** to assign to terminal device **13602.** While applications of application processor **13712** may still utilize separate network bearers across the selected network slice (where each network bearer is configured according to the individual QoS requirements of each application), selection of an ideal network slice that fits the QoS requirements of the applications may be much more effective than attempting to maintain a network bearer with QoS requirements that are not compatible with the supporting network slice.

As shown in FIG. **142,** manager application **14102** may report the service profile key to core infrastructure **14006** in **14206,** which as previously indicated may be a server system that implements various core network entities in a virtual manner across one or more servers. In particular, manager application **14102** may report the service profile key to a virtual entity of core infrastructure **14006** (e.g., a virtualized network function executed as software on core infrastructure **14006)** that is responsible for managing the assignment of terminal devices to network slices **14008-14012**, such as a mobility management entity or a dedicated network slice selection entity (e.g., an entity responsible for Common Control Network Functions (CCNF)). Manager application **14102** may report the service profile key on an existing radio access connection (e.g., on one of network slices **14008-14012** that terminal device **13602** is initially connected to) by providing the service profile key to controller **13710** for wireless transmission via RF transceiver **13704** and antenna system **13702.** If terminal device **13602** is not initially connected to radio communication network **14000,** controller **13710** may in some aspects transmit the service profile key to core infrastructure **14006,** e.g., as part of an initial attach or registration procedure. Additionally or alternatively, in some aspects controller **13710** may provide the service profile key to core infrastructure **14006** as part of a Tracking Area Update (TAU) or other registration update procedure. Additionally or alternatively, in some aspects controller **13710** may provide the service profile key to core infrastructure **14006** as standalone control signaling.

Core infrastructure **14006** may receive the service profile key in **14206** and select a network slice for terminal device **13602** in **14208** based on the service profile key. As the service profile key represents the QoS requirements of the installed/frequently-used applications identified by manager application **14102** in **14202,** in some aspects core infrastructure **14006** may be able to compare the QoS requirements indicated by the service profile key to the QoS provided by each of network slices **14008-14012** in **14208** in order to determine which of network slices **14008-14012** best satisfies the QoS requirements of the service profile key. For example, core infrastructure **14006** may compare the latency, reliability, mobility, charging, security, data rate, policy control, power consumption, battery life, capacity, and/or coverage properties of network slices **14008-14012** to the QoS requirements indicated by the service profile key to determine which of network slices **14008-14012** is able to meet the QoS requirements of the service profile key.

In some aspects, core infrastructure **14006** may be configured to select a network slice that collectively matches the QoS requirements as represented by the service profile key. Accordingly, core infrastructure **14006** may utilize a distance metric (e.g., a multi-variable distance measurement) or similar measure to compare the QoS requirements collectively represented by dedicated applications **14104-14106** to the properties of network slices **14008-14012** and to identify which of network slices **14008-14012** provides the closest match.

Additionally or alternatively, in some aspects core infrastructure **14006** may be configured to select a network slice to meet the most demanding QoS requirements. For example, if dedicated application **14104** has extreme requirements in one of the network slice dimensions (e.g., extreme throughput requirements for the MBB dimension, extreme coverage or battery life requirements for the mMTC dimension, extreme latency or reliability requirements for the URLLC dimension, etc.), core infrastructure **14006** may be configured to select a network slice that meets the extreme requirements, in other words, a network slice corresponding to the network slice dimension with the extreme requirements. Accordingly, in some aspects manager application **14102** may select the network slice that meets the most extreme requirements, even at the cost that other applications running on terminal device **13602** will not be using the network slice most suitable for their QoS requirements. For example, as previously described manager application **14102** may obtain point counts for each network slice dimension and provide a service profile key that reflects the point count for each dimension, e.g., a service profile key that indicates the network slice dimension with the highest point count or a service profile key that indicates each of the point counts. In some cases where the service profile key indicates the network slice dimension with the highest point count, core infrastructure **14006** may select the corresponding network slice in **14208,** which may ensure that the selected network slice addresses the most extreme requirements (as indicated by the network slice dimension with the highest point count). In some cases where the service profile key indicates the point counts of each network slice dimension (e.g., for a 3-dimensional), core infrastructure **14006** may identify the network slice dimension with the highest point count and select the corresponding network slice. Numerous variations with different QoS requirements indicated by the service profile key and different QoS provided by network slices **14008-14012** (including more network slices) are also within the scope of this disclosure.

Core infrastructure **14006** may then configure terminal device **13602** according to the selected network slice in **14210.** In some aspects, core infrastructure **14006** may notify terminal device **13602** of the selected network slice. For example, core infrastructure **14006** may notify controller **13710** of the selected network slice, provide a radio interface configuration for controller **13710** to use in accordance with the selected network slice, and release the existing radio and core network connection. Controller **13710** may then proceed to register with the selected network slice, which may include establishing a new radio and core network connection with the selected network slice (with the components of radio infrastructure **14002,** baseband infrastructure **14004,** and core infrastructure **14006** associated with the selected network slice, which may be a virtual association). For example, controller **13710** may establish network bearers for dedicated applications **14104-14106** as part of end-to-end bearers with data networks that provide the underlying services for dedicated applications **14104-14106,** e.g., data networks **14014** and **14016.** As controller **13710** may be utilizing the selected network slice, the network bearers may run along the virtual path of the selected network slice through radio infrastructure **14002,** baseband infrastructure **14004,** and core infrastructure **14006** to network gateways of radio communication network **14000** that interface with data networks **14014** and **14016.** Each of the network bearers may have unique QoS requirements depending on the QoS class of dedicated applications **14104-14106**; however, as the network bearers run through the selected network slice, the QoS afforded to each network bearer may be constrained by the QoS provided by the resources of the selected network slice. However, as core infrastructure **14006** has selected the selected network slice based on the QoS requirements indicated by the service profile key, the selected network slice may provide an advantageous balance between the QoS requirements of each of dedicated applications **14104-14106**.

In some aspects, core infrastructure **14004** may provide an explicit slice ID to terminal device **13602** that explicitly identifies the selected network slice to terminal device 13602. This slice ID information may be useful in cases such as where terminal device **13602** enters into a radio idle state at a later time. When transitioning back to radio connected state, terminal device **13602** may signal the slice ID to radio infrastructure **14002** during connection establishment procedures. This may provide radio infrastructure **14002** (e.g., a particular network access node that terminal device **13602** has initially attached to) with an indication of which core entities of core infrastructure **14006** to utilize that are consistent with the selected network slice. For example, in an exemplary LTE setting, terminal device **13602** may have moved to a new tracking area that is served by a different MME pool. Terminal device **13602** may provide the slice ID to an eNodeB during a TAU procedure, which may provide the eNB with an indication of which MME to select from a pool of possible MMEs for terminal device **13602** that is consistent with the selected network slice. Terminal device **13602** may similarly utilize the slice ID in the setting of other radio access technologies according to their specific mobility procedures.

Alternatively, in some aspects core infrastructure **14006** may not explicitly notify terminal device **13602** of the selected network slice, and information about the selected network slice may be available only in the radio communication network **14000.** For example, core infrastructure **14006** may configure the radio infrastructure **14002,** baseband infrastructure **14004** and core infrastructure **14006** for the selected network slice and notify controller **13710** to use a certain radio interface configuration according to the selected network slice. While controller **13710** may execute radio communications with the radio interface configuration, terminal device **13602** may not explicitly have knowledge of which of network slices **14008-14012** was selected by core infrastructure **14006** as the selected network slice.

For example, core infrastructure **14006** (e.g., an MME in an exemplary LTE setting) may select network resources (e.g., an SGW, PGW, and transmission means between the SGW and PGW and the eNB and SGW) that are able to meet the requirements indicated by the service profile key, e.g., may select a network slice that fits the service profile key. Core infrastructure **14006** may not explicitly provide a slice ID for the selected network slice to terminal device **13602,** and may instead store the slice ID internally (e.g., by the MME storing a certain SGW address and PGW address and storing interface identifiers (such as GTP Tunnel Endpoint ID (GTP TEID)) for the SGW towards the eNB, which implicitly define the transmission means).

In both cases, core infrastructure **14006** may provide a radio interface configuration for controller **13710** to utilize, where the radio interface configuration corresponds to the selected network slice. Controller **13710** may therefore proceed to execute data transfer over the selected network slice in **14212** using the radio interface configuration (where controller **13710** may or may not have explicit knowledge of the selected network slice). In some aspects, controller **13710** may map data packets provided by dedicated applications **14104-14106** to the appropriate network bearers (e.g., according to TFT filtering) and transmit the data packets on each network bearer across the selected network slice of radio communication network **14000** to network gateways (e.g., PGWs) of core infrastructure **14006,** which may then map the data packets from each network bearer onto counterpart external bearers (that each collectively form an end-to-end bearer with the counterpart network bearer) for transfer to data networks **14014** and **14016.** The network gateways may similarly filter data packets received from data networks **14014** and **14016** on the external bearers and map the data packets onto the appropriate network bearers (e.g., with TFT filtering) to deliver the data packets of each network bearer to terminal device **13602** across the selected network slice. In some aspects, controller **13710** may therefore execute data transfer over the selected network slice in **14212** in order to route data packets to and from dedicated applications **14104-14106** on the selected network slice.

As the installed and frequently-used applications at application processor **13712** may change over time, in some aspects manager application **14102** may continually repeat **14202-14206** in order to identify the installed/frequently-used applications and their associated QoS requirements and to determine the service profile key based on the identified QoS requirements. In some aspects, core infrastructure **14006** may then be able to dynamically adapt the network slice assigned to terminal device **13602** over time, which may ensure that terminal device **13602** is configured to utilize a network slice that satisfies the collective QoS requirements of the installed/frequently used applications of application processor **13712.** Such may be advantageous in deployments of radio communication network **14000** with fine-grained network slicing, e.g., with multiple mobile broadband network slices. As the data traffic profiles of dedicated applications **14104-14106** changes over time, in some aspects manager application **14102** may update the service profile key and trigger selection to a new network slice that ideally matches the current data traffic profile. Service may therefore be optimized for terminal device **13602.** In some aspects, core infrastructure **14006** may explicitly notify terminal device **13602** of the network slice update and provide a new radio interface configuration (if necessary for the network slice update). In some aspects, core infrastructure **14006** may not explicitly notify terminal device **13602** of the network slice update (although core infrastructure **14006** may provide a new radio interface configuration if necessary for the network slice update).

In some aspects, manager application **14102** may initiate the procedure detailed in message sequence chart **14200** periodically according to a fixed period or on the occurrence of certain triggering conditions. For example, manager application **14102** may initiate **14202-14204** each time that terminal device **13602** attaches to radio communication network **14000** or each time terminal device **13602** performs a registration update (e.g., a TAU, periodic TAU or a similar procedure).

In some aspects, the optimization targets utilized by manager application **14102** to assign QoS classes to dedicated applications **14104-14106** (e.g., with an operator-defined QoS class mapping) may also change over time, such as if a battery power of terminal device **13602** falls below a predefined level, if a billing cost of terminal device **13602** exceeds a predefined level, if a user of terminal device **13602** selects a power or cost saving setting, etc. As such actions may adjust the optimization target, manager application **14102** may re-assign QoS classes based on the new optimization target and select a new service profile key based on the updated QoS requirements. Core infrastructure **14006** may then select a new network slice for terminal device **13602** based on the new service profile key. In this manner, terminal device **13602** may also react to optimization target changes by triggering selection to new network slices.

These aspects may therefore enable terminal device **13602** to switch between network slices depending on the QoS requirements of the applications of terminal device **13602.** The use of optimization targets such as service, power consumption, and cost may also enable terminal device **13602** to utilize network slices that meet specific goals.

FIG. **143** shows method **14300** of performing radio communications in accordance with some aspects. As shown in FIG. **143,** method **14300** includes selecting a service profile key that represents service requirements of one or more applications of a terminal device **(14310),** reporting the service profile key to a radio communication network **(14320),** wherein the radio communication network includes a plurality of network slices, and receiving a response that causes the terminal device to utilize a target network slice of the plurality of network slices **(14330).**

FIG. **144** shows method **14400** of performing radio communications in accordance with some aspects. As shown in FIG. **144,** method **14400** includes receiving a service profile key from a terminal device that indicates service requirements of one or more applications of the terminal device **(14410),** selecting a target network slice from a plurality of network slices based on the service profile key **(14420),** wherein the plurality of network slices provide different service characteristics, and instructing the terminal device to utilize the target network slice to transfer data for the one or more applications **(14430).**

FIG. **145** shows method **14500** of performing radio communications in accordance with some aspects. As shown in FIG. **145,** method **14500** includes identifying QoS class assignments of one or more applications of a terminal device **(14510),** selecting from a plurality of service profile keys to identify a service profile key that meets the QoS class assignments of the one or more applications **(14520),** reporting the service profile key to a radio communication network and receiving a response that identifies a target network slice **(14530),** and executing data transfer using the target network slice **(14540).**In some aspects, application processor **13712** may be configured to override the default QoS classifications of applications such as dedicated applications **14104-14106** when establishing data bearers. For example, in normal operation, an application may provide a QoS classification to the baseband modem when requesting a data connection (e.g., via an Attention (AT) command over an interface between the application processor and the baseband modem). The baseband modem can then request a data bearer (e.g., a dedicated data bearer) from the network with the QoS classification. The network may then make a decision as to whether to accept the QoS classification or to deny the QoS classification, which may assist in preventing applications from receiving dedicated bearers that have unnecessarily high QoS. The QoS classification provided by a given application may be preprogrammed by the application developer and consequently application developers may provide QoS classifications that are likely to be accepted by the network while still meeting the QoS requirements of the application on a functional level.

The QoS classification provided by a given application may therefore be the default QoS classification. In some aspects, application processor **13712** may override the default QoS classifications provided by applications when requesting data bearers, and utilize different QoS classifications.

For example, in some aspects application processor **13712** may utilize a mapping for QoS classification to applications that specifies a QoS classification (e.g., a QCI) for various applications. The mapping may be a table that provides a QoS classification based on application ID, where each application may have an application identifier (which may be OS-specific). When an application requests a data bearer, application processor **13712** may access the mapping with the application ID of the application, retrieve the QoS classification mapped to the application ID, and request a data bearer for the application with the QoS classification.

This functionality may be handled at a manager application of application processor **13712** such as manager application **14102.** Manager application **14102** may therefore monitor data bearer requests originating from other applications of application processor **13712,** such as dedicated applications **14104-14106**. When manager application **14102** identifies a data bearer request from a given application, for example, dedicated application **14104,** manager application **14102** may access the mapping with the application ID of dedicated application **14104** to retrieve the QoS classification mapped to the application of dedicated application **14104.** Manager application **14102** may then provide a data bearer request to baseband modem **13706** (e.g., via an AT command that bridges the application-layer and protocol stack layers) with that requests a data bearer for dedicated application **14104** with the QoS classification. Baseband modem **13706** may then request the data bearer from radio communication network **13600,** which may accept or deny the data bearer request (and may allocated a data bearer with a different QoS classification if the initial data bearer request is denied). After radio communication network **13600** decides on a QoS classification for the data bearer and establishes the data bearer, dedicated application **14104** may proceed to transmit and receive data on the data bearer.

In some aspects, the mapping that is used to override the default QoS classifications may be provided by a network operator, for example, the operator of radio communication network **13600.** Radio communication network **13600** may therefore transmit the mapping to baseband modem **13706** (e.g., in the form of an Open Mobile Alliance (OMA) Managed Object (MO)), which may receive the mapping and provide the mapping to application processor **13712.** Manager application **14102** may then store the mapping in an accessible location, e.g., a local memory of application processor **13712.**

In some aspects, the QoS classifications of the mapping may be standardized QoS classification values, such as QCI mappings as standardized by the 3GPP in TS 23.203 or another type of RAT-specific QoS classification mapping. Accordingly, the mapping may map application IDs to standardized QoS classifications; however, applications may be mapped to different QoS classifications than the default QoS classification that the application is configured with. In some aspects, the QoS classifications of the mapping may be different from the standardized QoS classification values, and may be, for example, proprietary QoS classifications that are uniquely specified by the network operator.

In some aspects, the mapping of QoS classifications may depend on an optimization target. For example, as previously described, terminal device **13602** may operate with a service optimization target (e.g., optimized QoS), cost optimization target (e.g., the lowest cost service), or battery usage optimization target (e.g., the lowest battery power consumption), or a cost optimization target (e.g., the lowest cost). This target may be set by a user of terminal device **13602** (via user I/O), or may be triggered by manager application **14102** based on operating conditions of terminal device **13602** (e.g., low battery or poor radio conditions). In some aspects, manager application **14102** may request a mapping (via baseband modem **13706)** that is specific to the optimization target, and radio communication network **13600** may accordingly provide a mapping that maps QoS classifications to applications depending on the optimization target. For example, a service-optimized mapping may map QoS classifications with higher-performance QoS properties to applications than a mapping that is not service optimized, while a battery usage-optimized mapping may map QoS classifications that are lower-performance and/or associated with lower power consumption to applications. Radio communication network **13600** may then provide a mapping based on the requested optimization target. Alternatively, in some aspects manager application **14102** may modify the mapping based on an optimization target, such as by selecting different QoS classifications than those originally specified in the mapping based on the optimization target (e.g., by selecting higher-performance QoS classifications than those specified in the mapping).

In some aspects, a user of terminal device **13602** may be able to manually define and/or modify the mapping. Accordingly, manager application **14102** may accept user input that can generate the mapping from scratch and/or modify an existing mapping (which may have been originally provided by radio communication network **13600).** In some aspects, manager application **14102** may store multiple mappings, such as a network-provided mapping and a user-provided mapping. In some aspects, a network-provided mapping may take precedence over a user-provided mapping (e.g., manager application **14102** may utilize the network-provided mapping instead of the user-provided mapping), while in other aspects a user-provided mapping may take precedence over a network-provided mapping (e.g., manager application **14102** may utilize the user-provided mapping instead of the network-provided mapping).

4.2 QoS #2

In some aspects of this disclosure, an edge computing device may monitor user traffic to detect when a terminal device is accessing a data stream, access charging information for the terminal device to calculate a cost for accessing the data stream, and provide the calculated cost to the terminal device. Instead of or in addition to receiving charging information at a later time (e.g., a monthly bill or a notification when prepaid data allowance is depleted), the terminal device may receive charging information ‘upfront’ and enable a user of the terminal device to modify the data stream based on the charging information, such as to adjust the data stream in order to reduce charges. These aspects may therefore provide a mechanism to reduce costs and consequently improve user experience. These aspects may be used with power efficiency aspects described herein.

FIG. **146** shows an exemplary variation of radio communication network **13600** including edge computing server **14602,** which may be an edge computing device such as an edge computing server placed between network access node **13610** and core network **13902** that is positioned to monitor data traffic on the ‘user plane’. For example, in an LTE setting, edge computing server **14602** may be placed on the S1-U interface between network access node **13610** (e.g., an eNodeB) and an SGW of core network **13902.** Edge computing devices may be similarly placed on user traffic interfaces in any type of radio communication network, where the user traffic interfaces may generally by backhaul interfaces for the radio access network that carry uplink and/or downlink data traffic. Furthermore, while FIG. **146** depicts edge computing server **14602** as interfacing with network access node **13610** (and thus able to tap user traffic from terminal devices connected to terminal device **13610),** edge computing devices may also be placed further into the network (e.g., at deeper aggregation points for network access nodes) and accordingly may be able to tap user traffic from the terminal devices connected to multiple network access nodes. The placement of edge computing devices such as edge computing server **14602** may enable the edge computing devices to ‘tap’ user data traffic and provide a variety of services to terminal devices, including content caching (e.g., for popular videos or other multimedia), processing offloading, etc. Edge computing may therefore enable ultra-low latency services (due to the closer proximity to terminal devices), reduce processing load on terminal devices, and reduce signaling load over the core network.

In the setting of FIG. **146,** edge computing server **14602** may be able to access data traffic originating and terminating at terminal devices connected to network access node **13610.** As previously indicated, such data traffic may include user plane data traffic that is exchanged between terminal devices such as terminal device **13602** and external data networks **13904** and **13906.** In addition to various other edge computing services, edge computing server **14602** may be configured to monitor uplink and downlink data traffic passing through network access node **13610** in order to detect active or scheduled data streams, such as a data stream being delivered or scheduled to be delivered to terminal device **13602.** Edge computing server **14602** then be able to determine stream parameters, such as stream quality, bitrate, length, and/or duration, and may then calculate a stream cost. Edge computing server **14602** may then report the stream cost to terminal device **13602.** A user of terminal device **13602** may therefore be able to receive the stream cost ’upfront’ and may be able to modify the stream in order to adjust the stream cost. In contrast to implementations where users are provided with an accumulative bill at a later date (or notified when a prepaid data/voice plan has been depleted), these aspects may enable a user to reduce stream costs prior to initialization of or during delivery of a data stream.

FIG. **147** shows an exemplary internal configuration of edge computing server **14602,** which may include packet inspection module **14702** and cost calculation module **14704.** In some aspects, edge computing server **14602** may be implemented as a server that executes software-defined program code and provides various edge-computing services defined by the program code. In some aspects, packet inspection module **14702** and cost calculation module **14704** may be software modules defined as program code that edge computing server **14602** is configured to execute. Alternatively, in some aspects packet inspection module **14702** and cost calculation module **14704** may be separate processors that are each configured to execute separate software modules that define their respective functionalities. While the individual components of edge computing server **14602** are depicted separately in FIG. **147,** this depiction serves to highlight the operation of edge computing server **14602** on a functional level; consequently, in some aspects one or more of the components of edge computing server **14602** may be integrated into a common hardware and/or software element. Additionally, the functionality detailed herein (in particular e.g., the formulas/equations, flow charts, and prose descriptions) may be readily embodied by skilled persons as program code that can be stored on a non-transitory computer readable medium and subsequently retrieved from the non-transitory computer readable medium and executed by a processor.

As previously indicated, edge computing server **14602** may be configured to monitor the backhaul interface between network access node **13610** and core network **13902** (which may be e.g., an S1-U interface in an LTE setting) in order to detect data streams of terminal devices connected to network access node **13610.** Edge computing server **14602** may be perform packet inspection on data being transferred across the backhaul interface in order to detect data streams running through network access node **13610,** which may be e.g., video/audio/image/multimedia streams (live or buffered), file downloads, browser and application traffic, realtime machine or device control signaling (e.g., autonomous cars, IoT device control), etc. Upon identifying a data stream being delivered to or from a terminal device, edge computing server **14602** may evaluate stream control signaling in order to determine stream parameters such as the length, duration, size, etc., of the data stream. Edge computing server **14602** may then retrieve charging information for the terminal device and calculate the cost of the stream. Edge computing server **14602** may then report the stream cost to the terminal device, which may enable a user of the terminal device (or autonomous application) to adjust the data stream based on the stream cost.

FIG. **148** shows message sequence chart **14800,** which illustrates the operation of edge computing server **14602** according to some aspects. As shown in FIG. **148,** terminal device **13602** may first schedule or initiate a data stream in **14802** by exchanging stream control signaling with an external data network such as data network **13904.** As previously detailed, in some aspects **14532** may include terminal device **13602** establishing an end-to-end bearer with data network **13904** and initiating or scheduling active exchange of data over the end-to-end bearer. For example, terminal device **13602** (e.g., an application layer at application processor **13712)** may exchange stream control signaling with data network **13904** in order to set up a data stream, such as control data that specifies parameters for exchange of e.g., video/audio/image/multimedia streams, file downloads, browser and application traffic, realtime machine or device control signaling. After terminal device **13602** and data network **13904** have agreed upon the stream parameters via exchange of such stream control signaling, terminal device **13602** and data network **13904** may begin exchanging traffic for the data stream over the end-to-end bearer. Although the following description may focus on an individual data stream, in some aspects terminal device **13602** may utilize the end-to-end bearer to exchange multiple separate data streams with data network **13904** (over the same or separate bearers) and may exchange various other data streams with other data networks (where each data stream may take the same or a different path through core network **13902**).

Both the stream control signaling and the stream traffic may provide important information that details the data stream. Accordingly, edge computing server **14602** may monitor the backhaul interface between network access node **13610** and core network **13902** for stream data, including both stream control signaling and stream traffic, in order to detect planned or active data streams by terminal devices connected to network access node **13610.** In particular, packet inspection module **14702** may perform packet inspection (e.g., Deep Packet Inspection (DPI)) on backhaul interface traffic by decoding data packets on the backhaul interface to determine whether any stream data (stream control signaling or stream traffic) is contained in the packets. Packet inspection module **14702** may decrypt data packets on the backhaul interface according to the specific protocols utilized on the backhaul interface in order to inspect the data contained in the packet. By inspecting the data packets, packet inspection module **14702** may monitor the data packets for stream control signaling and stream traffic in order to detect planned or active data streams. Packet inspection module **14702** may therefore perform the packet inspection by decrypting the data packets, inspecting contents of the data packets (e.g., with plaintext analysis or other operations), re-encrypting the data packets, and forwarding the data packets on the original path.

For example, in some aspects terminal device **13602** may transmit user-plane IP packets to data network **13904** in connection with a first data stream, where the IP packets may include both stream control signaling and stream traffic as payload data. In addition to the payload, terminal device **13602** may generate the IP packets with an IP header that identifies terminal device **13602** as the source and data network **13904** as the destination. Controller **13710** of terminal device **13602** may process the original IP packets according to the user-plane cellular radio access protocols (e.g., Packet Data Convergence Protocol (PDCP), Radio Link Control (RLC), Media Access Control (MAC), and PHY in an LTE setting) and transmit the resulting PHY data over a radio access connection with network access node **13610.** Network access node **13610** may receive the transmitted data from terminal device **13602** and revert the cellular protocol stack processing to obtain the original IP packets.

Network access node **13610** may then utilize 'tunneling' protocols in order to transmit the IP packets through radio communication network **13600** (which may include a sequence of tunneling between network nodes of core network **13902**) to a network gateway of core network **13902,** which may route the IP packets to data network **13904.** For example, in an LTE setting network access node **13610** may utilize GPRS Tunnel Protocol (GTP) to encapsulate the IP packets with a GTP tunnel header and to transmit the GTP packets to an SGW of core network **13902.** The SGW may then examine the GTP tunnel header to identify a destination PGW, re-encapsulate the IP packets with a GTP tunnel header addressed to the destination PGW, and transmit the GTP packets to the PGW. The PGW may then remove the GTP tunnel header, read the IP header of the IP packet that identifies data network **13902** as the destination, and transmit the IP packet to data network **13902.** Network access node **13610** and core network **13902** may similarly utilize tunneling in the reverse downlink direction. Each GTP tunnel header may include a GTP header that specifies a Tunnel Endpoint ID (TEID), which uniquely identifies the associated terminal device. Various other radio access technologies may similarly utilize tunneling protocols in order to govern transport of IP data across radio communication networks.

As edge computing server **14602** may sit on the backhaul interface of network access node **13610,** edge computing server **14602** may obtain GTP packets that are being tunneled from network access node **13610** to core network **13902** (e.g., to an SGW of core network **13902** in an LTE setting). As indicated above, the GTP packets may contain a GTP tunnel header and IP packet. The GTP tunnel header may include a GTP header that identifies the associated terminal device, e.g., terminal device **13602,** while the IP packet contains an IP header (identifying the source and destination IP addresses) and IP payload.

In some aspects, packet inspection module **14702** may therefore inspect the data packets on the backhaul interface in **14804** by reverting the tunneling protocol and inspecting the IP header and payload data. The IP header may identify the source and destination of the IP packets; accordingly, packet inspection module **14702** may be able to determine which terminal devices and data network are attached to each IP packet (in both the uplink and downlink directions). Packet inspection module **14702** may also be configured to analyze the payload data (e.g., using plaintext analysis) in order to determine the contents of the IP packets. By evaluating the payload data in **14804,** packet inspection module **14702** may be able to identify stream control signaling and stream traffic associated with a particular data stream and may be able to determine various stream parameters of the data stream.

Accordingly, packet inspection module **14702** may detect the data stream from terminal device **13602** and data network **13904** in **14806.** For example, in some aspects packet inspection module **14702** may identify stream control signaling, such as stream setup or stream maintenance information, in the payload data. Additionally or alternatively, in some aspects packet inspection module **14702** may identify stream traffic in the payload data. As each IP packet can contain information about the destination and source IP addresses, packet inspection module **14702** may be able to identify terminal device **13602** and data network **13904** as the endpoints of the data stream (where the destination and source of the IP packets may depend on whether the IP packet is an uplink or downlink packet). As each GTP packet can also contain a GTP header with a field (e.g., a TEID) that uniquely identifies the associated terminal device, packet inspection module **14702** may also be able to identify terminal device **13602** based on the GTP header.

As edge computing server **14602** may aim to calculate the cost of the data stream, in some aspects packet inspection module **14702** may identify certain stream parameters from the IP packets that are related to the stream cost in **14808.** For example, packet inspection module **14702** may inspect the IP packets (which may contain stream control signaling or stream traffic) in order to identify one or more of a service tier, video codec, audio codec, destination/source/intermediate IP addresses, destination/source/intermediate MAC addresses, client device identity, client device type, content (e.g., audio, video, etc.) provider (e.g., an Over-The-Top (OTT) provider), operating system, browser type, media stream type, session protocol, transport protocol, media container, stream resolution/bitrate/quality (e.g., audio or video resolution), stream/file size/length, stream/file duration, etc. In some aspects, packet inspection module **14702** may identify such stream parameters by performing plaintext analysis on the IP headers and payload data. In some aspects, certain stream parameters may be explicitly specified in the IP headers and payload data while packet inspection module **14702** may infer other stream parameters, such as by estimating a duration or size of the data stream (e.g., based on historical streaming data, origin of stream, destination of stream, route through network, etc.), tracking frequently visited websites, popular content providers, etc., from the IP headers and payload data.

In some aspects, the stream parameters may depend on the type of stream. In some aspects, terminal device **13602** may initiate a data stream with data network **13902** in order to retrieve a video stream, e.g., where data network **13902** is a video server. As part of the initialization of the data stream, terminal device **13602** may transmit a Hypertext Transfer Protocol (HTTP) request to data network **13902.** The HTTP request, which may be stream control signaling and embodied as IP payload data, may identify data network **13902** and specify a variety of stream parameters for the video stream (including any one or more of service tier, video codec, audio codec, destination/source/intermediate IP addresses, destination/source/intermediate MAC addresses, client device identity, client device type, content (e.g., audio, video, etc.) provider (e.g., an Over-The-Top (OTT) provider), operating system, browser type, media stream type, session protocol, transport protocol, media container, stream resolution/bitrate/quality (e.g., audio or video resolution), stream/file size/length, stream/file duration, etc.). Packet inspection module **14702** may detect the HTTP request during inspection of IP packets and may therefore detect the data stream. In some aspects, packet inspection module **14702** may additionally or alternatively detect stream traffic (after the video stream has started), which may also contain certain stream parameters, to detect the data stream. Packet inspection module **14702** may similarly detect a variety of different data streams and determine the related stream parameters using packet inspection.

After determining the stream parameters in **14808,** packet inspection module **14702** may then provide the stream parameters to cost calculation module **14704,** which may be responsible for calculating a stream cost based on the stream parameters. As indicated above, in some aspects the stream parameters may be indicative of the stream cost. For example, in an exemplary scenario terminal device **13602** may have a 'pay-as-you-go' subscription or contract where a user of terminal device **13602** is charged based on the amount of data used by terminal device **13602.** Stream parameters such as bitrate/resolution, length/size, and duration may thus have a particularly large impact on stream cost. For example, data streams of large size, length, or duration may incur a larger cost to a user as they inherently consume more data. If a data stream is live, such as a live television stream, the cost of the stream may directly depend on the stream bitrate/resolution and the duration of time that a user accesses the data stream. Additionally, users may need to pay more (per bit) for higher-quality streams or may need to pay more (per bit) for streams provided by certain providers. Furthermore, certain types of streams, such as an audio stream vs. a video stream, may also incur different costs (per bit).

Other billing agreements such as prepaid plans may also be relevant to some aspects. For example, a user may prepay for a certain amount of data or may be allotted a certain amount of data as part of an ongoing subscription (e.g., monthly bills that are paid after). The user may then consume the allotted data at a rate according to the stream parameters, where higher quality, larger size, and longer duration streams may incur larger deductions from the allotted data. These aspects may therefore be applicable to any type of billing agreement.

Cost calculation module **14702** may be responsible for calculating the stream cost (which may be an exact cost or an estimation). As different billing agreements can have different cost parameters (e.g., a different price per kilobit/megabit/gigabit of data, different prices for different qualities, different prices for different stream types, etc.), cost calculation module **14702** may access the charging information for terminal device **13602** in order to calculate the stream cost. In some aspects, the charging information for terminal device **13602** may be stored at charging server **14604,** which may be located in core network **13902** as shown in FIG. **146** (charging server **14604** may be in a different core network if terminal device **13602** is roaming). For example, in an LTE setting, charging server **14604** may be a server entity that is configured to perform LTE Policy Charging and Control (PCC), which can include Policy and Charging Rules Function (PCRF, which provides policy control and flow based charging control decisions), Policy and Charging Enforcement Function (PCEF, implemented in the SGW and enforces gating and QoS for individual IP flows on the behalf of the PCRF; also provides usage measurements to support charging), Online Charging System (OCS, provides credit management and grants credit to the PCEF based on time, traffic volume or chargeable events), or Offline Charging System (OFCS, receives events from the PCEF and generates charging data records (CDRs) for the billing system). In some aspects, charging server **14604** may be or may be part of a Business Support System (BSS). Other radio access technologies may similarly have charging functions that charging server may assume.

Regardless of radio access technology specifics, charging server **14604** may be a server that stores charging information for terminal device **13602.** As noted above, if terminal device **13602** is roaming, charging server **14604** may be located external to core network **13902,** e.g., in a core network of the 'home' radio communication network of terminal device **13602.**

Cost calculation module **14704** may therefore query charging server **14604** in **14810** for charging information for terminal device **13602.** Charging server **14604** may receive the charging information query, access a database containing charging information for various terminal devices, retrieve the charging information for terminal device **13602,** and respond to the query in **14812** by providing the charging information for terminal device **13602** to cost calculation module **14704.** Edge computing server **14602** may utilize a software-level connection with charging server **14604** in order to request and receive the charging information in **14810-14812,** such as a Diameter or Radius protocol that may be implemented in radio communication network **13600** that allows that various nodes to communicate with each other over the various inter-node interfaces.

In some aspects, the charging information may include subscriber plan and available data allowance information that may detail the specific charging rates for certain types of streams (that may vary based on any one or more of the stream parameters introduced above). Cost calculation module **14704** may calculate the stream cost in **14814** based on the charging information provided by charging server **14604** and the stream parameters identified by packet inspection module **14702.** For example, if the stream is fixed in size or duration (which may be indicated by the stream parameters identified by packet inspection module **14702**), such as a video or audio stream of finite duration or a file of finite size, cost calculation module **14814** may utilize the charging information and stream parameters to calculate the fixed cost of the stream. Alternatively, if the stream has floating size or duration, such as a live stream, cost calculation module **14704** may utilize the charging information and stream parameters to calculate the stream cost as a floating cost, such as cost per second, cost per minute, etc. Cost calculation module **14704** may thus calculate stream cost information in **14814** that indicates a cost of the data stream. In some aspects, cost calculation module **14704** can also calculate stream cost information in **14814** based on competitive factors, such as the actual or estimated cost of the stream as provided by a competitor network. In some aspects, cost calculation module **14704** can may also interface with charging server **14604** to negotiate the cost of the stream, such as with a counter-offer feature. Cost calculation module **14704** and charging server **14604** may then work to match or beat competing offers from other networks and allow users (e.g., of terminal device **13602**) to make counter offers.

As shown in FIG. **148,** cost calculation module **14704** may then provide the stream cost information to terminal device **13602** in **14816.** The delivery method of the stream cost information by edge computing server **14602** may depend on the specific interface between terminal device **13602** and edge computing server **14602.** For example, in some aspects where edge computing server **14602** and terminal device **13602** have a direct software-level connection for exchanging data at the cellular protocol stack layers, edge computing server **14602** may provide the stream cost information to terminal device **13602** over the software-level connection. However, in many edge computing implementations, MEC servers may be substantially 'transparent' to terminal devices at the cellular level and therefore may not have a direct software-level connection to terminal devices at the cellular protocol stack layers. Accordingly, in some aspects edge computing server **14602** may utilize a higher-layer mechanism to deliver the stream cost information to terminal device **13602** in **14816.** For example, edge computing server **14602** may utilize Short Message Service (SMS) messaging to provide the stream cost information to terminal device **13602.** In this case, edge computing server **14602** may open a connection to an SMS server (e.g., a SMS Center (SMSC) in an LTE setting) in core network **13902** and transmit an SMS to terminal device **13602** via the SMS server that specifies the stream cost information. Terminal device **13602** may then receive the SMS and present the SMS contents including the stream cost information to a user. Alternatively, in some aspects edge computing server **14602** may provide the stream cost information to terminal device **13602** using an application-layer mechanism, such as a push notification or in-app message. For example, edge computing server **14602** may have a software-level connection at the application-layer with application processor **13712** and may deliver the stream cost information to application processor **13712** as e.g., a push notification or in-app message. The push notification or in-app message may be for an application specifically dedicated to user billing, e.g., a dedicated billing application, or may be an in-app message for an application that is using the data stream, e.g., a dedicated streaming application. For example, if a user of terminal device **13602** is using a video watching application (executed at application processor **13712;** e.g., a YouTube mobile application), edge computing server **14602** may deliver the stream cost information to terminal device **13602** as a push notification or in-app message to the video watching application (e.g., over an application layer connection between edge computing server **14602** and application processor **13712).** Regardless, cost calculation module **14704** may provide the stream cost information to terminal device **13602** in **14816.**

Accordingly, some aspects may enable delivery of 'upfront' stream cost information to a user, e.g., either during an active stream or prior to a scheduled stream (e.g., depending on when packet inspection module **14702** detects the data stream in **14806**). The user of terminal device **13602** may then be able to decide in real-time whether to continue the data stream, cancel the data stream, or modify the data stream in **14818** based on the stream cost information provided by edge computing server **14602.** For example, terminal device **13602** may present a user with an SMS message from edge computing server **14602** that specifies the stream cost information. Alternatively, in some aspects terminal device **13602** may present the stream cost information provided by edge computing server **14602** to a user via a dedicated billing application or dedicated streaming application. The user may then be able to evaluate the stream cost information and decide how to proceed in **14818.** For example, if the user decides that the cost of the data stream is too expensive, the user may cancel the stream via user input to terminal device **13602.** If the user decides that the data stream is not too expensive, the user may not cancel the stream and may passively allow the data stream to continue.

In some aspects, the user may also be able to modify the data stream in order to adjust the cost. Such functionality may rely on cooperation from the provider of the data stream. For example, if the user decides that the data stream is too expensive, the user may provide user input that requests a cost reduction. The cost reduction may be e.g., a reduction in quality/resolution/bitrate, a reduction in stream duration, etc. For example, if the data stream is fixed in size/duration/length, the stream cost information provided by edge computing server **14602** may be a fixed stream cost. The user may then request a cost reduction (via user input to terminal device **13602** at the application layer) from the provider (e.g., at data network **13904),** in response to which the provider may reduce the quality/resolution/bitrate of the data stream. Such may reduce the data transferred on a bit-level and consequently reduce the cost of the stream. Alternatively, in some aspects where the data stream is floating in size/duration/length, e.g., a live or realtime stream, the stream cost information provided by edge computing server **14602** may be a floating cost, e.g., a cost per minute (or other measure of time). The user may then request a cost reduction (via user input to terminal device **13602** at the application layer) from the provider, in response to which the provider may reduce the quality/resolution/bitrate of the data stream. Such may reduce the data transferred over time and may consequently reduce the cost of the stream per time. Alternatively, in some aspects, the user may be able to specify (via user input) a specific cost that the user is willing to pay. Terminal device **13602** may then execute the data stream until the cost has reached the cost specified by the user. Alternative to user input cases, an application at application processor **13712** of terminal device **13602** may automatically handle cost reduction requests in **14818,** e.g., using a set of rules, etc., or making a suggestion to the user, e.g., based on a set of rules, etc. For example, application processor **13712** may utilize a set of rules (e.g., embodied as executable instructions) to determine when to trigger a cost reduction request and to determine the specifics of the cost reduction request. In some aspects, application processor **13712** may trigger suggestions to the user based on the set of rules, such as by determining when a cost reduction request should be triggered, and wait for user input to confirm or deny the cost reduction request before actually sending the cost reduction request. In some aspects, application processor **13712** can perform such decisions in a fully autonomous manner (e.g., with no input from a user) or in a semi-autonomous (or hybrid) manner (e.g., where a user provides some input regarding the cost reduction).

In some aspects, cost reduction measures arising from stream modification requests may depend on the provider of the data stream. For example, certain providers may provide the functionality to modify the data stream (e.g., by modifying bitrate/quality/resolution, such as offering a stream in High Definition (HD) and non-HD) while other providers may not provide such functionality. In some aspects where the provider does not provide stream modification functionality, a user of terminal device **13602** may instead be able to cancel or passively allow the data stream, such as by terminating the data stream with the streaming application that is using the data stream. Additionally or alternatively, in some aspects edge computing server **14602** may provide functionality to modify a data stream. For example, edge computing server **14602** may be able to reduce the quality/bitrate/resolution of a data stream in the downlink direction (e.g., by decrypting the packets of the data stream, processing the data packets to reduce the quality/bitrate/resolution, and forwarding the processed data packets on the interface to terminal device **13602** instead of the original data stream). Terminal device **13602** may be configured to request such functionality from edge computing server **14602.**

In some aspects, terminal device **13602** may modify the data stream in order to adjust stream cost using network slices. Specifically, instead of modifying the data stream at the provider (e.g., data network **13904)** or with edge computing server **14602,** in some aspects radio communication network **13600** may transfer the network bearer supporting the data stream onto a network slice with different parameters. For example, a first network slice of radio communication network **13600** may be configured with resources that result in high quality/bitrate/resolution data streams while a second network slice of radio communication network **13600** may be configured with resources that result in lower quality/bitrate/resolution data streams. If terminal device **13602** is initially receiving the data stream over the first network slice and a user of terminal device **13602** wishes to e.g., reduce the cost of the data stream, terminal device **13602** may request or trigger a network slice change, such as with a network slice control entity of core infrastructure **14006.** Core infrastructure **14006** may then transfer the network bearer (thus also modifying the overlaying end-to-end bearer) from the first network slice to the second network slice and may consequently reduce the cost of the data stream. Alternatively, in some aspects terminal device **13602** may be charged higher rates for data transfer on certain network slices for other reasons (such as where certain network slices have higher priority, reliability, latency, etc.); accordingly, terminal device **13602** may reduce the stream cost by requesting to transfer the network bearer for the data stream to a less-expensive network slice. Core infrastructure **14006** may then transfer the network bearer to the less expensive network slice, which may reduce the stream cost to terminal device **13602.**

In some aspects, instead of calculating a single stream cost (fixed cost or floating cost over time) to provide to terminal device **13602,** cost calculation module **14704** may calculate several different costs that are each based on different stream parameters (e.g., different quality/bitrate/resolution, different duration, etc.) in **14814** and provide the different costs and associated stream parameters to terminal device **13602** in **14816.** A user of terminal device **13602** may then be able to consider the different costs and stream parameters and select an appropriate version of the data stream (defined by the stream parameters). The provider (e.g., data network **13904)** may then provide the selected version of the data stream to terminal device **13602** (or edge computing server **14602** may process the stream to provide the selected version).

In some aspects, edge computing server **14602** may be the provider of the data stream. For example, edge computing server **14602** may perform multimedia delivery or caching functions, such as storing popular multimedia at the network edge for ultra-low latency delivery to terminal devices. Edge computing server **14602** may then perform the same functions detailed in FIG. **148** in addition to modifying the data stream based on any decisions by terminal device **13602** (if any).

In some aspects, the placement of edge computing server **14602** within radio communication network **13600** may be flexible. For example, the functionality of edge computing server **14602** detailed above may be placed at network access node **13610** or at a network gateway (such as an SGW) of core network **13900.** Various other placements of edge computing server **14602** where edge computing server **14602** is able to tap user plane traffic on various different interfaces within radio communication network **13600** are also within the scope of this disclosure.

These aspects may therefore provide a mechanism for terminal devices to receive upfront stream cost information for data streams. Instead of or in addition to receiving a bill at a later time or a notification that a prepaid allowance has been depleted, these aspects may provide users with stream cost information that indicates e.g., fixed stream costs and floating per-bit costs of streams. These aspects may enable users to make dynamic decisions (e.g., whether to continue with a data stream, to cancel a data stream, or to modify a data stream) based on the stream cost information, which may reduce costs to users and improve user experience.

FIG. **149** shows method **14900** of managing a data stream in accordance with some aspects. As shown in FIG. **149,** method **14900** includes performing packet inspection on a backhaul interface for a radio access network **(14910),** detecting a data stream for a terminal device based on the packet inspection and identifying one or more stream parameters of the first data stream based on the packet inspection **(14920),** determining a stream cost for the first data stream based on the one or more stream parameters **(14930),** and providing the stream cost to the terminal device **(14940).**

FIG. **150** shows method **15000** of managing a data stream in accordance with some aspects. As shown in FIG. **150,** method **15000** includes performing packet inspection on a backhaul interface for a radio access network to detect a data stream of a first terminal device **(15010),** receiving charging information for the terminal device from a charging server **(15020),** calculating a stream cost of the terminal device based on the charging information and one or more parameters of the data stream **(15030),** and providing the stream cost to the terminal device **(15040).**

4.3 QoS #3

In some aspects of this disclosure, a terminal device may modify or optimize services (e.g., voice, SMS, IP data, IP messaging, push notifications, etc.) provided by a network in order to ensure that battery power is sufficient to support certain priority services for an extended duration of time. For example, in an exemplary use scenario, a user may be expecting a voice call in the next two hours. The user may therefore indicate to a terminal device that voice service is a priority service and that the priority service period is two hours. In some aspects, the terminal device may interact with the radio communication network in order that voice services are enabled while other non-priority services (such as SMS, IP data, IP messaging, push notifications, etc.) are suspended or limited over the priority service period.

By suspending or limiting the non-priority services, the terminal device may conserve battery power and may instead dedicate battery power to voice services, e.g., the priority service, over the two-hour priority service period. The terminal device may therefore improve the likelihood that there will be sufficient battery power to receive the call at any point during the two-hour priority service period. As will be detailed, these aspects may be applied in a variety of similar scenarios to ensure that a terminal device has sufficient battery power to execute priority services over a priority service period. These aspects may be used with power efficiency aspects described herein

FIG. **151** shows an exemplary internal configuration of terminal device **13602** in accordance with some aspects. As shown in FIG. **151,** terminal device **13602** may include antenna system **13702,** RF transceiver **13704,** physical layer processing module **13708,** processing module **15102,** and power supply **13716.** Antenna system **13702,** RF transceiver **13704,** physical layer processing module **13708,** and power supply **13716** may each be configured in the manner detailed above regarding FIG. **137.** Processing module **15102** may be implemented as a hardware-defined and/or software-defined module. In some aspects, processing module **15102** may be include baseband modem and/or application processor components, and may in some aspects include controller **13710** and application processor **13712.** In some aspects, in addition to the functionality detailed herein these aspects, processing module **15102** may also perform the functionality of controller **13710** and application processor **13712.** In some aspects, processing module **15102** may be integrated with physical layer processing module **13708,** such as where controller **13710** of processing module **15102** may be implemented in a baseband modem with physical layer processing module **13708.**

As previously indicated, terminal device **13602** may be configured to identify scenarios where low battery power may prevent terminal device **13602** from performing certain services. Terminal device **13602** may then identify priority services that should be maintained and non-priority services that can be suspended or limited. Terminal device **13602** may additionally identify a priority service period during which terminal device **13602** wishes to ensure that the priority services are available.

In some aspects, terminal device **13602** may aim to ensure that there is sufficient battery power to perform the priority services over the priority service period. Accordingly, terminal device **13602** may rely on cooperation from the radio communication network in order to ensure that the priority services are maintained and that the non-priority services are suspended or limited. Accordingly, terminal device **13602** may report the priority information, including the priority services and priority service period, to a network access node, e.g., network access node **13610** of FIG. **136.** Network access node **13610** may then be responsible for continuing to execute the priority services and to suspend or limit the non-priority services for the duration of the priority service period. Terminal device **13602** may therefore avoid using battery power on the non-priority services for the duration of the priority service period and may instead dedicate the remaining battery power to the priority services. In some aspects, this may assist terminal device **13602** in executing the priority services, such as in the case introduced above where terminal device **13602** needs to receive a call in the near future.

FIG. **152** shows message sequence chart **15200** in accordance with some aspects. As shown in FIG. **152,** these aspects may involve cooperation between terminal device **13602** and network access node **13610** in order to maintain priority services and suspend or limit non-priority services. Terminal device **13602** may implement these aspects at processing module **15102.** In some aspects, processing module **15102** may be configured to retrieve and execute software-defined program code that when executed by processing module **15102** controls terminal device **13602** to perform the functionality detailed herein. In some aspects, processing module **15102** may utilize RF transceiver **13704,** and antenna system **13702** to transmit and receive radio signal with network access node **13610.** On the network side, control module **13810** may be configured with software-defined program code that when executed by control module **13810** controls network access node **13610** to perform the functionality detailed herein.

As shown in FIG. **152,** processing module **15102** may first trigger service prioritization in **15202.** In some aspects, processing module **15102** may trigger the service prioritization in **15202** in response to various different trigger scenarios, which may include user-initiated triggers and/or battery power-initiated triggers. For example, a user of terminal device **13602** may trigger the service prioritization in **15202** by specifying one or more priority services optionally in addition to a priority service period. In particular, in some aspects a user may specify one or more priority services, such as voice services, SMS services, IP data services, IP messaging services, push notification services, etc., via user input to terminal device **13602** (e.g., via key input, touchscreen input, button input, etc., which may interface with application processor **13712**). In some aspects, the user may also specify a priority service period, in other words, a time period during which the priority services should be maintained. In some aspects, the user may provide the user input at the application layer of terminal device **13602,** such as at a settings application provided by processing module **15102.**

Processing module **15102** may recognize such user input and trigger service prioritization based on the user input in **15202.** For example, a user of terminal device **13602** may be expecting a voice call within the next two hours. The user may therefore specify to processing module **15102** that voice services are a priority for the next two hours. Upon receipt of such user input, processing module **15102** may trigger service prioritization in **15202.** There may be a variety of similar use scenarios based on user-initiated triggering. For example, a user may wish to place an outgoing voice call in the next two hours, may need to utilize a specific application (e.g., an email application) in the next three hours, may need to view a certain multimedia stream (e.g., a live video feed) in the next four hours, may be expecting an SMS in the next two hours, may wish to send an SMS in the next three hours, etc. All variations of priority services and priority service periods are within the scope of this disclosure. Additionally, in some aspects a user may also specify multiple services that should be prioritized.

After triggering service prioritization in **15202,** processing module **15102** may identify priority services and non-priority services in **15204.** Processing module **15102** may identify each service received by user input as a priority service and may identify the remaining services (if any) as non-priority services, or may use a set of rules, which may be defined by a user, and which may be context-sensitive, e.g., setting service priorities during a meeting. Accordingly, in the exemplary use scenario introduced above, processing module **15102** may identify voice service as a priority service and may identify SMS services, IP data services, IP messaging services, push notification services, etc., as non-priority services in **15204.** Alternatively, instead of identifying all remaining services as non-priority services, processing module **15102** may evaluate the remaining battery power of power supply **13716** and determine which (if any) of the remaining services should be disabled in order to ensure that terminal device **13602** has sufficient battery power to support the priority services. Processing module **15102** may therefore be configured to identify the non-priority services based on the remaining battery power level.

Processing module **15102** may then determine the priority service period in **15206.** As indicated above, in some aspects a user of terminal device **13602** may specify (via user input) a duration of time during which the priority services should be available. Processing module **15102** may utilize this duration of time as the priority service period. If the user does not specify a duration of time, in some aspects processing module **15102** may determine that the priority service period is indefinite. If the user does not specify a duration of time, in some aspects processing module **15102** may select a 'default' priority service period, which may be any duration such as one hour, two hours, etc.

Processing module **15102** may therefore identify one or more priority services, non-priority services, and a service priority period during which the priority services should be maintained. Although shown sequentially in FIG. **152,** processing module **15102** may also determine the priority service period in **15206** and determine which network services should be disabled as non-priority services in order to ensure that terminal device **13602** has sufficient battery power to operate the priority services for the duration of the priority service period. For example, in some aspects processing module **15102** may be aware of the power consumption of the network services and, based on the priority service period, may be configured to determine which network services can remain active during the priority service period (to increase the likelihood that there is sufficient battery power for the priority services) and which network services will be interrupted during the priority service period. Processing module **15102** may therefore identify the non-priority services based on the remaining battery power of power supply **13716** in addition to the power consumption attributes of the network services.

Processing module **15102** may then report the priority service information (the priority services, non-priority services, and priority service period, where the priority service period may be a definite time period or may be indefinite) to network access node **13610** in **15208.** As previously indicated, processing module **15102** may transmit the priority service information to network access node **13610** with physical layer processing module **13708,** RF transceiver **13704,** and antenna system **13702** via a radio access connection.

Control module **13810** of network access node **13610** may receive the priority service information (via antenna system **13802,** radio module **13804,** and physical layer module **13808**) in **15208.** As the priority service information indicates one or more priority services that terminal device **13602** is requested be maintained for the duration of the priority service period and one or more non-priority services that do not need to be maintained for the duration of the priority service period, in some aspects control module **13810** may then suspend or limit the non-priority services in **15210** for the priority service period. Control module **13810** may continue to execute the priority services in **15212.** As the non-priority services have been suspended or limited by network access node **13610,** in some aspects processing module **15102** may interrupt the non-priority services for the duration of the priority service period, which may include interrupting reception of non-priority service data or only receiving limited non-priority service data. After the priority service period expires in **15214,** processing module **15102** and control module **13810** may continue executing non-priority services along with priority services in **15214.** Furthermore, instead of explicitly specifying the non-priority services in the priority service information in **15208,** in some aspects processing module **15102** may explicitly specify the priority services without explicitly specifying the non-priority services. Control module **13810** may then identify the priority services that are explicitly specified and may infer that some or all other services are non-priority services. Alternatively, in some aspects processing module **15102** may explicitly specific the non-priority services without explicitly specifying the priority services in the priority service information. In any case, control module **13810** may identify the priority services and the non-priority services based on the priority service information in **15208.**

In order to suspend/limit non-priority services in **15210** and continue executing priority services in **15212,** control module **13810** may identify data arriving at network access node **13610** (e.g., from core network **13902** as shown in FIG. **139**) that is addressed to terminal device **13602** and associated with the priority services and to identify data arriving at network access node **13610** that is addressed to terminal device **13602** and associated with the non-priority services. Control module **13810** may then allow the priority service data to pass through network access node **13610** (by transmitting the priority service data to terminal device **13602,** thus executing priority services in **15212)** while preventing or limiting the non-priority service data (thus suspending/limiting non-priority services in **15210**).

In some aspects, control module **13810** may filter incoming data packets addressed to terminal device **13602** in **15210** and **15212** to identify priority service data and non-priority service data. For example, each priority service may be associated with a QoS class, where voice traffic, SMS traffic, IP data traffic, IP messaging traffic, push notifications, etc., may each have different QoS classes. In some aspects, processing module **15102** may specify the QoS classes along with the priority service information in **15208.** Alternatively, in some aspects control module **13810** may be able to determine the QoS classes for the priority service data and non-priority service data based on a predefined and/or standardized relationship (such as QCI mappings for different traffic types in an LTE setting) between communication service types and QoS classes. Control module **13810** may therefore be able to determine the QoS classes for the priority service data and the QoS classes for the non-priority service data. Control module **13810** may then compare the QoS class for incoming data to the priority service QoS classes and the non-priority service QoS classes to determine which data is priority service data and which data is non-priority service data.

As terminal device **13602** has requested that priority services be maintained for the duration of the priority service period, control module **13810** may route the priority service data to terminal device **13602** over the radio access network in **15212.** In order to conserve battery power at terminal device **13602** for the duration of the priority service period, in some aspects control module **13810** may suspend or limit non-priority service data in **15210** during the duration of the priority service period. For example, control module **13810** may suspend non-priority service data by 'buffering' identified non-priority service data at network access node **13610.** Accordingly, control module **13810** may hold the non-priority service data for the duration of the priority service period and thus may not route the non-priority service data to terminal device **13602.** As terminal device **13602** may not receive the non-priority service data for the duration of the priority service period, terminal device **13602** may not expend battery power receiving non-priority service data and may therefore conserve battery power to receive priority service data (e.g., in **15212**). After the priority service period has expired in **15210,** control module **13810** may retrieve the buffered non-priority service data and route the non-priority service data to terminal device **13602** over the radio access connection.

In some aspects, control module **13810** may additionally or alternatively limit the non-priority services in **15210** for the duration of the priority service period. Instead of completely suspending non-priority service data, control module **13810** may instead route limited non-priority service data to terminal device **13602,** where the limited non-priority service data may be reduced in size or delayed. For example, instead of immediately routing non-priority service data to terminal device **13602** as in typical scheduling operations, control module **13810** may buffer incoming non-priority service data (addressed to terminal device **13602**) until there is a sizable amount of buffered non-priority service data (e.g., the amount of buffered non-priority service data exceeds a threshold). Control module **13810** may then route the buffered non-priority service data to terminal device **13602** for the duration of the priority service period. As the buffered non-priority service data has been delayed, it may be considered 'limited'. However, in some aspects it may be more power efficient for terminal device **13602** to receive a limited number of condensed 'bursts' of non-priority service data than to receive a constant stream of sporadic non-priority service data. After the priority service period has expired in **15214,** control module **13810** may stop limited non-priority service data and may route the non-priority service data to terminal device **13602** as it arrives according to typical scheduling.

In some aspects, control module **13810** may buffer non-priority service data for the duration of the priority service period and may transmit a limited amount of data to terminal device **13602** in place of the non-priority service data. For example, control module **13810** may transmit a notification to terminal device **13602** (not explicitly shown in FIG. **152**) that specifies that non-priority service data is waiting for terminal device **13602,** where the notification may also identify the type and/or source of the non-priority service data. Processing module **15102** of terminal device **13602** may then receive the notification and decide whether or not to receive the non-priority service data. For example, processing module **15102** may check the remaining battery power of power supply **13716** and determine whether there is sufficient remaining battery power (e.g., that will be sufficient to support priority services for the duration of the priority service period) to receive the non-priority service data. In some aspects, processing module **15102** may also consider the importance of the non-priority service data indicated by network access node **13610.** If processing module **15102** decides to receive the non-priority service data, processing module **15102** may transmit a positive response to network access node **13610** that instructs network access node **13610** to transmit the non-priority service data. Controller **13810** may then receive the response and transmit the non-priority service data (for the duration of the priority service period). If processing module **15102** decides not to receive the non-priority service data, processing module **15102** may transmit a negative response to network access node **13610** that instructs network access node **13610** not to transmit the non-priority service data.

Control module **13810** may therefore suspend or limit non-priority services in **15210** for the duration of the priority service period. As detailed above, control module **13810** may have several different options that may be used to suspend or limit non-priority service data. Control module **13810** may apply the same suspending/limiting procedure to all incoming non-priority service data (addressed to terminal device **13602**) or may apply different suspending/limiting procedures to different incoming non-priority service data (addressed to terminal device **13602**), such as by suspending some non-priority service data and limiting other non-priority service data (e.g., based on the type or source of the non-priority service data).

As shown in FIG. **152,** control module **13810** may continue executing priority services with terminal device **13602** in **15212** and may therefore continue routing incoming priority service data (addressed to terminal device **13602**) to terminal device **13602** for the duration of the priority service period. After the priority service period has expired, control module **13810** may resume execution of non-priority services by routing incoming non-priority service data to terminal device **13602** (without suspension or limiting) along with priority service data.

The priority and non-priority services detailed in the exemplary scenario detailed above regarding FIG. **152** may be considered 'network' services, e.g., services that rely on an online network connection. As these network services are therefore supported by network access node **13610,** terminal device **13602** may rely on cooperation from network access node **13610** to suspend or limit the non-priority services. For example, if terminal device **13602** ignored the non-priority services without notifying network access node **13610,** terminal device **13602** may miss the non-priority service data. Terminal device **13602** may therefore notify network access node **13610** of the non-priority services in order to enable network access node **13610** to 'buffer' or 'hold' the non-priority service data and subsequently deliver the non-priority service data at a later time, such as after expiry of the priority service period.

In some aspects, terminal device **13602** may also utilize 'local' services as the priority services, which may be 'offline' services that do not rely on a network connection. For example, a user of terminal device **13602** may wish to conserve battery power at terminal device **13602** in order to utilize a local service, such as an application executed at application processor **13712.** In order to conserve battery power to dedicate to the local service, terminal device **13602** may aim to suspend or limit non-priority network services while locally performing the priority local services (which may not rely on a network connection via network access node **13610**). FIG. **153** shows message sequence chart **15300** illustrating this procedure. Similar to message sequence chart **15200,** processing module **15102** may trigger service prioritization in **15302,** which may be prompted by user input. For example, a user of terminal device **13602** may indicate that a local service such as a locally executed application is a priority service. In some aspects, the user may also indicate a time period during which the user wishes to ensure that terminal device **13602** has sufficient battery power to continue operating the local priority service.

Processing module **15102** may then identify priority services and non-priority services in **15304.** In particular, processing module **15102** may identify the local service specified by the user as a priority service. Processing module **15102** may then identify some or all network services as non-priority services. For example, in some aspects processing module **15102** may be configured to identify all network services as non-priority services. In some aspects, processing module **15102** may be configured to evaluate the remaining battery power of power supply **13716** and determine which network services should be disabled as non-priority services in order to ensure that terminal device **13602** retains sufficient battery power to operate the priority services.

Processing module **15102** may then determine the priority service period in **15306,** which may be, for example, based on a user input or a default priority service period. Although shown sequentially in FIG. **153,** in some aspects processing module **15102** may determine the priority service period in **15306** and determine which network services should be disabled as non-priority services in order to increase the likelihood that terminal device **13602** has sufficient battery power to operate the priority services for the duration of the priority service period. For example, processing module **15102** may be aware of the power consumption of the network services and, based on the priority service period, may be configured to determine which network services can remain active during the priority service period (to ensure that there is sufficient battery power for the priority services) and which network services should be interrupted during the priority service period. In some aspects, processing module **15102** may therefore identify the non-priority services based on the remaining battery power of power supply **13716** in addition to the power consumption attributes of the network services.

Processing module **15102** may then report the priority service information to network access node **13610** in **15308.** As the priority services may only be local services and the non-priority services may only be network services, processing module **15102** may only report the non-priority services (in addition to the priority service period) to network access node **13610** in **15308.** Control module **13810** may then suspend or limit non-priority services in **15310** for the duration of the priority service period. As the priority services may be local services, processing module **15102** may locally execute the priority services in **15312.** As the non-priority services have been suspended or limited by network access node **13610,** processing module **15102** may interrupt the non-priority services for the duration of the priority service period, which may include interrupting reception of non-priority service data or only receiving limited non-priority service data. After the priority service period expires, control module **13810** may resume the non-priority services in **15314.** Terminal device **13602** may therefore also utilize local 'offline' services as priority services and, with cooperation from network access node **13610,** may suspend or limit non-priority services in order to conserve battery power for operation of local services.

In the exemplary scenarios of FIG. **152** and **153,** control module **13810** may utilize a timer to define the priority service period. In other aspects, the priority service period may be based on location or movement parameters, For example, processing module **15102** may provide the service priority period (e.g., as provided by a user of terminal device **13602**) with the priority service information in **15408.** In some aspects, control module **13810** of network access node **13610** may start a timer at **15210** or **15310** when non-priority services are suspended/limited, where the timer is set to run for the duration of the priority service period. Control module **13810** may then suspend/limit priority services for the duration of the timer and, upon timer expiry in **15214** or **15314,** resume execution of the non-priority services in **15214** or **15314.**

In some aspects, processing module **15102** may be configured to prematurely terminate service prioritization, e.g., prior to the priority service period expiring. FIG. **154** shows an exemplary scenario in message sequence chart **15400** where processing module 15102 may prematurely terminate service prioritization. Processing module **15102** and control module **13810** may perform **15402-15412** in the same manner as **15202-15212** of FIG. **152.** Accordingly, control module **13810** may start a timer at **15410** to track the priority service period, during which control module **13810** will suspend/limit non-priority services in **15410** and execute priority services in **15412.** However, prior to expiry of the timer, processing module **15102** may terminate service prioritization in **15414** by transmitting a notification to network access node **13610** that instructs network access node **13610** to terminate service prioritization. Control module **13810** may therefore stop suspending/limiting non-priority service data and may resume routing non-priority service data to terminal device **13602** along with priority service data in **15416.**

Processing module **15102** may terminate service prioritization in **15414** based on user input or automatically. For example, a user of terminal device **13602** may provide user input that service prioritization should be disabled. Further to the example, a user of terminal device **13602** that triggered service prioritization in order to e.g., conserve battery power to receive a voice call (or another priority service) may receive the voice call. Accordingly, the user may no longer need service prioritization and may provide user input to processing module **15102** that instructs processing module **15102** to terminate service prioritization. In an alternative example, processing module **15102** may detect that the priority service (e.g., indicated by user input in **15402**) has been received from network access node **13610** and may automatically terminate service prioritization in **15414.** In another alternative example, a user of terminal device **13602** may plug terminal device **13602** into a charging supply, which may alleviate the need to conserve battery power through service prioritization. The user may then provide user input to processing module **15102** that instructs processing module **15102** to terminate service prioritization; alternatively, processing module **15102** may automatically detect that power supply **13716** is being charged and may automatically terminate service prioritization. In some aspects, processing module **15102** may then reengage service prioritization if terminal device **13602** is subsequently unplugged from the charging supply.

In some aspects, processing module **15102** and control module **13810** may implement the process of message sequence chart **15400** in scenarios where terminal device **13602** does not specify a definite priority service period. For example, a user of terminal device **13602** that triggers service prioritization in **15402** via user input may not specify a definite priority service period. For example, a user may be expecting e.g., a voice call but may not know when the voice call will occur. Accordingly, the user may not provide a definite priority service period and processing module **15102** therefore may determine the priority service period in **15406** as being an indefinite priority service period. Processing module **15102** may then indicate in the priority service information in **15408** that the priority service period is an indefinite priority service period.

Instead of starting a timer set to track the priority service period and suspending/limiting non-priority services for the duration of the priority service period, in some aspects control module **13810** may indefinitely suspend/limit non-priority services in **15410.** Control module **13810** may continue to suspend/limit non-priority services until terminal device **13602** instructs network access node **13610** to terminate service prioritization in **15414,** which may be e.g., triggered when terminal device **13602** receives the priority services (indicated by user input or automatically) or when terminal device **13602** is plugged into a charging supply. Alternatively, as suspending/limiting non-priority services for an indefinite duration may not be reasonable (as the suspending/limiting could continue endlessly), control module **13810** may use a default long-term priority service period when terminal device **13602** reports an indefinite priority service period in **15408.** Control module **13810** may then start a timer set to track the long-term priority service period in **15410** and may suspend/limit non-priority services for the duration of the long-term priority service period. In some aspects, the long-term priority service period may be an extended duration of time, e.g., 10 hours, 24 hours, etc. Control module **13810** may then continue to suspend/limit non-priority services until the long-term priority service period expires or until terminal device **13602** instructs network access node **13610** to terminate service prioritization in **15414.** Such may enable network access node **13610** to suspend/limit non-priority services for extended durations of time without becoming stuck in an endless priority service period (e.g., if terminal device **13602** never instructs network access node **13610** to terminate service prioritization).

As previously indicated, service prioritization triggering (e.g., in **15202** and **15402**) may be prompted by user-initiated triggers (e.g., user input) as well as battery power-initiated triggers. In some aspects, processing module **15102** and control module **13810** may implement the process of message sequence chart **15400** to respond to battery power-initiated triggers. For example, processing module **15102** may continuously monitor the remaining battery power at power supply **13716** and compare the remaining battery power to a predefined threshold. If the battery power is below the threshold, processing module **15102** may automatically (e.g., without being prompted by user input) trigger service prioritization in **15402.** As processing module **15102** may not have been informed of any priority services (e.g., via user input), processing module **15102** may then autonomously identify the priority and non-priority services in **15404.** For example, processing module **15102** may be preprogrammed to automatically select certain services, such as voice services, as priority services and to select the remaining services as non-priority services. For example, a user of terminal device **13602** may be able to preprogram via user input into processing module **15102** which services are priority services (and thus should be prioritized in low battery power scenarios); alternatively, processing module **15102** may be preprogrammed with certain priority services by a manufacturer, software update, or another external configured mechanism.

Processing module **15102** and control module **13810** may then perform the process of message sequence chart **15400** in the manner detailed above. Specifically, processing module **15102** may therefore identify the priority and non-priority services in **15404** based on such preprogramming. Processing module **15102** may then determine the priority service period in **15406,** which may be e.g., an indefinite priority service period as a definite priority service period has not been specified. Processing module **15102** may then report the priority service information to network access node **13610** in **15408,** which may then suspend or limit non-priority services in **15410.** Control module **13810** may either utilize a default long-term priority service period or an indefinite priority service period and may suspend or limit non-priority service data until either the priority service period expires or until terminal device **13602** instructs network access node **13610** to terminate service prioritization. For example, processing module **15102** may detect if terminal device **13602** has been plugged into a charging supply and, if so, may terminate service prioritization in **15414.** Terminal device **13602** may therefore automatically trigger service prioritization in order to conserve battery power for certain priority services when battery power is low (e.g., falls below a predefined threshold).

In some aspects, terminal device **13602** may be configured to progressively disable services as battery power decreases. FIG. **155** shows priority curve **15500** that illustrates an exemplary progressive disablement scheme. As shown in FIG. **155,** processing module **15102** may initially have all services (voice, SMS, IP messaging, and IP data) active when battery power of power supply **13716** is high. Processing module **15102** may monitor the remaining battery power of power supply **13716** over time to determine if the remaining battery power falls below any of a set of predefined thresholds **15502-15508** and may progressively disable services based on which thresholds the remaining battery power falls below. In some aspects, the services may be organized in a hierarchical priority, where IP data services are the lowest priority (threshold **15502**), IP messaging services is the second lowest priority (threshold **15504**), SMS services is the second highest priority (threshold **15506**), and voice services is the highest priority (threshold **15508**). The hierarchical priority shown in FIG. **155** is exemplary and the services may be organized in any prioritized order.

FIG. **156** shows message sequence chart **15600** illustrating the progressive service disablement according to some aspects. As shown in FIG. **156,** processing module **15102** may trigger service prioritization in **15602.** Processing module **15102** may trigger service prioritization either based on battery power or a combination of battery power and a user indication of a priority service. For example, in a battery power-triggering case, processing module **15102** may continuously monitor the remaining battery power at power supply **13716** over time and compare the remaining battery power to predefined thresholds **15502-15508.** Accordingly, in a use scenario starting from full or substantially full battery power, processing module **15102** may continuously compare the remaining battery power to threshold **15502.** As the remaining battery power of power supply **13716** gradually drops, the remaining battery power may eventually fall below threshold **15502.** Processing module **15102** may then automatically trigger service prioritization in **15602** and identify IP data services as a non-priority service in **15604.** Processing module **15102** may then disable IP data services in **15606** by reporting to network access node **13610** that IP data services should be disabled. Control module **13810** may then suspend or limit IP data services in **15608.** As control module **13810** has suspended or limited IP data services, processing module **15102** may interrupt IP data services, which may include interrupting reception of IP data services or only receiving limited IP data services.

In the battery power triggering case, processing module **15102** may in some aspects trigger service prioritization in **15602** based on battery power alone. Alternatively, in a combined battery power and user-initiated triggering case, processing module **15102** may in some aspects only trigger service prioritization in **15602** in response to a user indication of a priority service. For example, a user may indicate a priority service (via user input), which may either be a local service or a network service. In response to this user indication, processing module **15102** may trigger service prioritization in **15602** and begin monitoring battery power to identify potential non-priority services in **15604.** Accordingly, in the combined battery power and user-initiated triggering case, processing module **15102** may, in some cases, only initiate disablement of network services if a user indicates that there is a priority service. Processing module **15102** may then progressively disable network services as battery power drops in order to preserve battery power for priority services.

After triggering service prioritization in **15602,** processing module **15102** may continue to monitor the remaining battery power of power supply **13716,** which may gradually become depleted. As the remaining battery power becomes depleted, processing module **15102** may progressively disable services with network access node **13610** based on the thresholds associated with each service. If the user has indicated that any of the services (IP data services, IP messaging services, SMS services, or voice services) is a priority service, processing module **15102** may not disable the priority service and may not take any action when the battery power falls below the threshold associated with the priority service.

When the remaining battery power falls below threshold **15504,** processing module **15102** may identify the associated service (e.g., IP messaging services in the exemplary setting of FIG. **155**) as a non-priority service and instruct network access node **13610** to disable the identified non-priority service in **15610.** Control module **13810** may therefore suspend or limit the identified non-priority service in **15612.** Processing module **15102** may then interrupt the identified non-priority service. In some aspects, processing module **15102** may continue to monitor the remaining battery power of power supply **13716** and notify network access node **13610** of non-priority services when the remaining battery power falls below one of the progressive predefined thresholds. Accordingly, if the remaining battery power falls below threshold **15504,** processing module **15102** may identify the associated service (e.g., IP messaging services) as a non-priority service and instruct network access node **13610** to disable the identified non-priority service in **15610.**

Eventually, the remaining battery power will either fall below threshold **15508** (prompting processing module **15102** to notify network access node **13610** that voice services are a non-priority service and should be disabled) or terminal device **13602** will be plugged into a charging supply. If terminal device **13602** is plugged into a power supply, processing module **15102** may terminate service prioritization in **15614,** which may prompt control module **13810** to resume the previously disabled non-priority services. In some aspects, processing module **15102** may immediately terminate service prioritization for all services or may progressively re-enable communicate services (e.g., according to thresholds **15502-15508** or another progressive threshold scheme) as power supply **13716** gradually becomes charged. Processing module **15102** and control module **13810** may therefore cooperate according to these aspects in order to progressively disable services (e.g., arranged in a prioritized hierarchy) based on a gradual depletion of battery power.

Alternatively, if processing module **15102** is using a combined battery power and user-initiated triggering, in some aspects a user of terminal device **13602** may provide a service priority period when identifying the priority service. For example, the user may wish to preserve battery power over a definite period in order to ensure that terminal device **13602** can execute the priority service. Processing module **15102** may provide the priority service period to network access node **13610,** e.g., in **15606** when disabling the non-priority service in **15606.** Accordingly, instead of suspending or limiting non-priority services until terminal device **13602** terminates service prioritization in **15614,** control module **13810** of network access node **13610** may suspend or limit non-priority services until the priority service period has expired. Control module **13810** may utilize a timer set to the priority service period in order to determine when to terminate service prioritization and resume non-priority services.

Although detailed above as implemented in a network access node, e.g., network access node **13610,** in some aspects the network side functionality may be implemented in an edge computing device, such as edge computing server **14602** as previously shown in FIG. **146.** As edge computing server **14602** may be positioned on the backhaul interface (e.g., an S1-U interface in an LTE setting) of network access node **13610,** edge computing server **14602** may be able to monitor the backhaul interface for data addressed to terminal device **13602.** Similar to the manner previously detailed regarding packet inspection, edge computing server **14602** may be configured to inspect packets on the backhaul interface in order to detect data addressed to terminal device **13602** and to identify which communication service the data is associated with. For example, network access node **13610** and core network **13902** may exchange data on the backhaul interface with a tunneling protocol (e.g., GTP in an LTE setting). Edge computing server **14602** may therefore inspect the data packets according to the tunneling protocol in order to identify which bearer each data packet is mapped to (e.g., by examining TEID in the GTP tunneling header in an LTE setting) and accordingly may be able to determine the QoS class of the bearer. By identifying the QoS class of a given data packet, edge computing server **14602** may be able to determine which communication service the data packet is associated with, e.g., voice services, SMS services, IP data services, IP messaging services, etc. Processing module **15102** may therefore notify edge computing server **14602** (e.g., via a software-level connection) of priority services, non-priority services, and priority service periods in the same manner as detailed in FIGs. **152, 154,** and **156.** Edge computing server **14602** may then suspend or limit non-priority services for the duration of the priority service period or until processing module **15102** instructs edge computing server **14602** to terminate service prioritization. Edge computing server **14602** may therefore be configured to retrieve (e.g., from a non-transitory computer readable medium) and execute software-defined program code in order to execute this functionality.

As some edge computing devices may be capable of deeper packet inspection than network access nodes (e.g., may be able to perform inspection on application-layer and IP data), in some aspects edge computing server **14602** may also be configured to enforce more specific priority service rules. For example, as opposed to filtering traffic into priority and non-priority services based on QoS class, processing module **15102** and edge computing server **14602** may also enforce fine-grained priority service filtering. For example, processing module **15102** may specify to edge computing server **14602** that only data from certain data networks (e.g., PDNs) are considered priority services. Edge computing server **14602** may then perform packet inspection (e.g., by evaluating IP headers or payload) to determine which traffic addressed to terminal device **13602** is tied to these data networks. Edge computing server **14602** may then route this priority service data to terminal device **13602** and may suspend or limit all other data as non-priority service data. In some aspects, the deep packet inspection may also be implemented in network access node **13610,** which may enable terminal device **13602** and network access node **13610** to implement fine-grained priority service filtering (e.g., without the use of an edge computing device).

The priority and non-priority service filtering may be performed on any type of communication service. For example, terminal device **13602** and network access node **13610**/edge computing server **14602** may apply priority service filtering based on any of the above-indicated voice services, SMS services, IP data services, IP messaging services, push notification services in addition to emergency calls, specific contacts or phone numbers, phone calls/messages from specific areas, emails from specific people, etc. In another exemplary use scenario, terminal device **13602** may wish to prioritize a ‘tracking service’, which may be an application that continuously tracks the location of terminal device **13602** such as part of an emergency application. The tracking service may rely on a network connection via network access node **13610** to ‘ping’ terminal device **13602.** Accordingly, in order to ensure that terminal device **13602** has sufficient battery power to operate the tracking service, terminal device **13602** may instruct network access node **13610** to treat the tracking service as a priority service and one or more other network services as non-priority services. Network access node **13610** may then suspend or limit non-priority services data and route priority service data for the tracking service to terminal device **13602.**

These aspects may therefore enable terminal device **13602** to conserve battery power and dedicate remaining battery power to certain priority services. As network access node **13610** or edge computing server **14602** may suspend or limit non-priority services, terminal device **13602** may minimize the amount of radio activity and processing, thus conserving power. Terminal device **13602** may also be able to enter longer sleep states during periods in which no priority service data is incoming which may not be possible if non-priority services were also activated. Furthermore, the suspension or limiting of non-priority services data may also reduce congestion over the radio access network. In some aspects, terminal device **13602** may not report the priority service information to network access node **13610,** and may unilaterally cease executing the non-priority services (e.g., without actively receiving or transmitting data to network access node **13610**). This may, however, in some cases cause the network to determine that terminal device **13602** is unresponsive and terminate the non-priority services. This may depend on the configuration and behavior of the network.

FIG. **157** shows method **15700** of performing radio communications in accordance with some aspects. As shown in FIG. **157,** method **15700** includes monitoring a remaining battery power of the terminal device **(15710),** determining that the remaining battery power has fallen below a first threshold **(15720),** selecting a first network service from a prioritized set of network services and interrupting the first network service by reporting the first network service to a radio communication network **(15730),** determining that the remaining battery power has fallen below a second threshold that is less than the first threshold **(15740),** and selecting a second network service from the prioritized set of network services with a higher priority than the first network service, and interrupting the second network service by reporting the second network service to the radio communication network **(15750).**

FIG. **158** shows method **15800** of performing radio communications in accordance with some aspects. As shown in FIG. **158,** method **15800** includes receiving user input that identifies a priority service and a time period during which the priority service is requested **(15810),** interrupting a non-priority service by reporting the non-priority service to a radio access network **(15820),** executing the priority service during the time period **(15830),** and resuming the non-priority service over the radio access network after the time period has expired **(15840).**

4.4 QoS #4

In some aspects of this disclosure, a terminal device may determine when power- or thermal-constrained scenarios occur, classify traffic based on QoS characteristics, and throttle (or ‘restrict’) non-critical traffic while continuing to transmit critical traffic. Accordingly, instead of delaying or throttling all traffic in a substantially uniform matter, these aspects may identify traffic that is critical (e.g., realtime traffic, other latency-sensitive traffic, user-priority traffic, etc.) and other traffic that is non-critical (e.g., non-realtime traffic, other latency-tolerant traffic, non-user-priority traffic, etc.) and apply the throttling to the non-critical traffic. These aspects may therefore reduce power consumption or temperature in power- or thermal-constrained scenarios by throttling non-critical traffic. Transfer of critical traffic such as realtime and/or user-priority traffic may, in some cases, not be interrupted.

FIG. **159** shows an internal configuration of terminal device **13602** in accordance with some aspects. As shown in FIG. **159,** terminal device **13602** may include antenna system **13702,** RF transceiver **13704,** physical layer processing module **13708,** processing module **15912,** power supply **13716,** and sensor **13718,** which may each be configured in the same manner detailed above regarding FIG. **137.** Other components of terminal device **13602** not directly related to these aspects in addition to control, power, and clock lines may not be expressly shown in FIG. **159.** In some aspects, processing module **15912** may include controller **13710** and application processor **13712.** In some aspects, processing module **15912** may be implemented as a software-defined module, such as one or more processors configured to retrieve and execute program code to perform arithmetic, control, and I/O instructions. In some aspects, processing module **15912** may be implemented as a hardware-defined module such as one or more dedicated hardware circuits configured to perform specific tasks, e.g., one or more hardware accelerators. The functionality of these aspects may therefore be implemented in processing module **15912** with software-defined and/or hardware-defined modules. These aspects may be used with power efficiency aspects described herein.

As shown in FIG. **159,** processing module **15912** may include traffic control module **15902,** classification module **15904,** detection module **15906,** application **15908,** and application **15910.** Traffic control module **15902,** classification module **15904,** and detection module **15906** may be structurally realized as a hardware-defined module, e.g., as one or more dedicated hardware circuits or FPGAs, as a software-defined module, e.g., one or more processors configured to execute program code defining arithmetic, control, and I/O instructions (e.g., software and/or firmware) stored in a non-transitory computer-readable storage medium, or as a mixed hardware-defined and software-defined module. As processing module **15912** may in some aspects include controller **13710** and application processor **13712,** traffic control module **15902,** classification module **15904,** detection module **15906,** application **15908,** and application **15910** may be software-defined and/or hardware-defined components of controller **13710** or application processor **13712.** While the individual components of processing module **15912** are depicted separately in FIG. **159,** this depiction serves to highlight the operation of processing module **15912** on a functional level. One or more of the components of processing module **15912** may therefore also be integrated into a common hardware and/or software component.

Application **15908** and application **15910** may be software-defined applications executed on a processor, such as software modules defined as program code that can be retrieved and executed by a processor. For example, application **15908** and application **15910** may be executed at processing module **15912** by application processor **13712** (which may also execute one or more additional applications), and may be application programs that are user-interactive. For example, applications **15908** and **15910** may be web browser applications, email applications, news applications, stock market applications, messaging applications, voice/video call applications, gaming applications, multimedia streaming applications, camera applications, etc. Applications **15908** and **15910** may be 'online' applications that exchange data over a communication network. For example, applications **15908** and **15910** may establish data connections with various data networks, e.g., data networks **13904** and **13906** as shown in FIG. **139,** that rely on radio access and core network connections provided by network access node **13610** and core network **13902** for data transfer through radio communication network **13600.**

As detailed above regarding bearers and QoS requirements, applications **15908** and **15910** may have certain service requirements for the data connections that may be targeted to ensure smooth operation. Accordingly, in an exemplary scenario application **15908** may be a realtime application (such as a voice call application, a video call application, a live multimedia streaming application, a live gaming application, etc.) and application **15910** may be a non-realtime application (such as an email application, a web browser application, a messaging application, a news application, a stock market application, etc.). Data networks **13904** and **13906** may be counterpart servers to application **15908** and **15910,** respectively, that provide data for the associated realtime and non-realtime services. The data connection (or bearer) for application **15908** may therefore have stricter latency and throughput requirements than the data connection for application **15910** in order to support the latency-sensitive and traffic-heavy realtime service of application **15908.** Conversely, the data connection for application **15910** may have less sensitive requirements to support the best-effort non-realtime services of application **15910.**

The data connection for application **15910** may therefore be more tolerant towards scheduling delays and throughput reductions than the data connection for application **15908.** However, there may be certain operational scenarios in which terminal device **13602** may restrict data transfer, which may impact the data connections for applications **15908** and **15910.** For example, if terminal device **13602** has low battery power (at power supply **13716**), terminal device **13602** may throttle radio transmissions in order to reduce power consumption. In another example, if terminal device **13602** is overheating, terminal device **13602** may throttle radio transmissions in order to reduce the temperature of terminal device **13602.**

However, if terminal device **13602** applies uniform throttling (e.g., where data is affected uniformly), the data transfer for applications **15908** and **15910** may be affected to the same degree. While application **15910** may be able to tolerate such throughput and latency restrictions (as a non-realtime application), application **15908** may suffer noticeable service degradation (as a realtime application). This may frustrate user experience.

Throttling may also have a negative impact if certain applications are prioritized by a user. For example, a user of terminal device **13602** may provide user input to processing module **15912** that indicates that application **15908** or application **15910** is a user-priority application. A user may therefore indicate that e.g., application **15908** is a user-priority application, for example, because the user frequently uses or checks application **15908.** For example, the user may utilize application **15908** as an email application for work or business, and accordingly may wish to receive new incoming emails and send outgoing emails as quickly as possible. In another example, a user may be driving or on a hike and use application **15908** as a navigation application. The user may therefore wish to receive updates and interact with application **15908** in a prompt manner. In another example, a user may frequently engage in stock trading and may utilize application **15908** as a stock market application. The user may therefore wish to receive price updates and quotes as soon as possible. Other variations regarding user preferences and applications **15908** and **15910** may yield similar scenarios in which a user may wish to prioritize application **15908** or **15910.**

If terminal device **13602** applies uniform throttling in power-constrained or thermal-constrained scenarios (collectively referred to herein as 'critical scenarios'), data transfer for applications **15908** and **15910** may be equally affected. Accordingly, even if application **15908** is prioritized by a user, terminal device **13602** may throttle traffic for application **15908,** which may cause the user to receive application updates and other online application functions on a delay. This may frustrate user experience.

Accordingly, these aspects may employ selective power and thermal management based on the criticality of data traffic. When in critical scenarios such as thermal- and/or power-constrained scenarios, terminal device **13602** may therefore classify data as either critical traffic (e.g., realtime traffic or user-priority traffic) or non-critical traffic (e.g., non-realtime traffic or non-user-priority traffic) and subsequently restrict (e.g., by throttling) transmission of the non-critical traffic while continuing to transmit the critical traffic. By selectively applying transmission restrictions to non-critical traffic, terminal device **13602** may reduce power consumption or temperature in power- or thermal-constrained situations while still maintaining sufficient transfer of critical traffic. In the exemplary scenario introduced above (where application **15908** is a realtime application or user-priority application and application **15910** is a non-realtime application or non-user-priority application), terminal device **13602** may continue to transmit data for application **15908** while restricting transmission for application **15910.** Terminal device **13602** may therefore continue to meet the QoS requirements of application **15908** at the expense of application **15910.** However, as application **15910** may be non-realtime or non-user-priority, the degradation in service to application **15910** may be acceptable to a user. Terminal device **13602** may implement these aspects for one or both of thermal- and power-management. Accordingly, in some aspects terminal device **13602** may implement throttling counter high temperature or overheating scenarios. In other aspects, terminal device **13602** may implement throttling to counter low battery power. In other aspects, terminal device **13602** may implement throttling to counter both high temperature/overheating and low battery.

FIG. **160** shows method **16000,** which processing module **15912** may be configured to execute in accordance with some aspects to detect and respond to thermal-constrained scenarios. As shown in FIG. **160,** detection module **15906** may monitor the temperature of terminal device in **16002.** Accordingly, detection module **15906** may monitor measurement data provided by sensor **13718,** which may be a thermal sensor such as a thermometer or other temperature sensor. Detection module **15906** may monitor sensor **13718** to track the temperature of terminal device **13602.** In some aspects, detection module **15906** may continuously (or periodically, e.g., with a fixed measurement period) monitor the temperature of terminal device **13602** in **16002.**

Detection module **15906** may then determine in **16004** whether terminal device **13602** is thermal-constrained in **16004.** For example, detection module **15906** may compare the temperature obtained in **16002** with a temperature threshold. If the temperature is below the temperature threshold, detection module **15906** may determine that terminal device **13602** is not thermal-constrained, e.g., that terminal device **13602** is not overheating. Traffic control module **15902** may then apply normal traffic control in **16006** and accordingly may not apply any restrictions to data transmissions. In the exemplary scenario introduced above regarding applications **15908** and **15910,** traffic control module **15902** may continue to execute data transfer for applications **15908** and **15910** in a normal manner, such as by executing data transfer for applications **15908** and **15910** according to the appropriate communication protocols and/or according to the QoS requirements of applications **15908** and **15910.**

If detection module **15906** determines that the temperature is above the temperature threshold, detection module **15906** may determine that terminal device **13602** is thermal-constrained and continue to **16008,** where classification module **15904** may classify incoming traffic (e.g., provided by applications **15908** and **15910**) as critical traffic or non-critical traffic. The number of applications detailed herein (e.g., two) is exemplary and may be scalable to any number of applications.

Classification module **15904** may implement any of a variety of techniques to classify the traffic of applications **15908** and **15910** as critical or non-critical traffic. For example, in some aspects classification module **15904** may classify realtime traffic as critical traffic and non-realtime traffic as non-critical traffic. In some aspects, classification module **15904** may classify user-priority traffic as critical traffic and non-user priority traffic as non-critical traffic. In some aspects, classification module **15904** may consider realtime vs. non-realtime in identifying critical traffic without considering user-priority vs. non-user priority. In some aspects, classification module **15904** may consider user-priority vs. non-user priority in identifying critical traffic, without considering user-priority vs non-user priority. In some aspects, classification module **15904** may consider both realtime vs. non-realtime and user-priority vs. non-user priority in identifying critical traffic.

For example, in some aspects, a user may select via user input whether classification module **15904** will consider only one of realtime and user-priority or both of realtime and user-priority in identifying critical traffic. For example, classification module **15904** may receive user input that specifies user instructions as to whether classification module **15904** should consider realtime and/or user-priority in identifying critical traffic. In some aspects, classification module **15904** may be preprogrammed to consider only one of realtime and user-priority in identifying critical traffic. In some aspects, classification module **15904** may be preprogrammed to consider both of realtime and user-priority in identifying critical traffic. In some aspects, classification module **15904** may be configured to consider only realtime in identifying critical traffic unless a user provides user input that indicates user-priority of certain applications or services and, if a user provides user input that indicates user-priority of certain applications or services, may be configured to consider only user-priority or may be configured to consider both user-priority and realtime.

In some aspects where classification module **15904** is configured to classify traffic based on user-priority, a user may provide user input (e.g., prior to or during method **16000)** that indicates applications and/or services that are user-priority. For example, in some aspects a user may provide user input to classification module **15904** that specifies one or more applications (e.g., applications **15908** or **15910**) that are user-priority applications. Classification module **15904** may then record application identification information (such as an application ID) for each user-priority application. In some aspects, a user may provide user input to classification module **15904** that specifies one or more services that are user-priority applications, where each service may correspond to a general class of applications.

For example, a user may wish to prioritize messaging applications. Instead of identifying each of the messaging applications individually, the user may provide user input to classification module **15904** that specifies that messaging services are user-priority. Classification module **15904** may then consider traffic for messaging applications as user-priority traffic. In another example, a user may wish to prioritize multimedia streaming applications. Instead of identifying each multimedia streaming application individually, the user may provide user input to classification module **15904** that specifies that multimedia streaming services are user-priority. Classification module **15904** may then consider traffic for multimedia applications as user-priority traffic. Classification module **15904** may record user-priority services specified by a user input.

Classification module **15904** may therefore be configured in **16008** to classify data packets as either critical or non-critical based on criteria related to e.g., realtime, user-priority, rules, etc. Classification module **15904** may use a variety of different information and techniques to classify data packets. For example, in some aspects applications **15908** and **15910** may be configured to provide metadata that indicates characteristics of the data packets that are generated by applications **15908** and **15910.** For example, applications **15908** and **15910** may be executed on application processor **13712** as dedicated applications that interface with controller **13710** via the Operating System (OS) of application processor **13712** and a modem driver with baseband modem **13706.** Applications **15908** and **15910** may therefore generate uplink data packets (which may be e.g., IP packets) and provide the data packets to controller **13710** (via the OS and modem driver) for transmission. Controller **13710** may process the data packets according to the user-plane cellular protocol stack protocols and provide the resulting uplink data to physical layer processing module **13708** for radio transmission via RF transceiver **13704** and antenna system **13702.**

In some aspects, applications **15908** and **15910** may 'tag' data packets (e.g., provided to the OS and modem driver) with a traffic priority indicator that indicates whether the data packets are realtime or non-realtime. For example, applications **15908** and **15910** may tag data packets with a Type of Service (TOS) or Differentiated Services Code Point (DSCP) in the IP header that indicates the QoS of the data packet. Classification module **15904** may therefore check the traffic priority indicators of the data packets provided by applications **15908** and **15910** to determine whether the data packets are realtime or non-realtime. In some aspects, classification module **15904** may check the traffic priority indicator of each data packet to classify each data packet as realtime traffic or non-realtime traffic. For example, certain applications may generate some data packets that are realtime traffic and other data packets that are non-realtime traffic, such as a multimedia streaming application that provides streaming traffic (realtime traffic) and signaling traffic (non-realtime traffic). Accordingly, applications **15908** and **15910** may tag each data packet with a traffic priority indicator that indicates whether each data packet is realtime or non-realtime. Classification module **15904** may then classify each data packet (regardless of the originating application) as realtime or non-realtime traffic based on the traffic priority indicator.

In some aspects, applications **15908** and **15910** may be preprogrammed as either a realtime application or a non-realtime application. Applications **15908** and **15910** may then be configured to tag each uplink data packet with a traffic priority indicator that indicates the preprogrammed traffic priority configuration. Accordingly, regardless of whether the data packet is realtime or non-realtime, applications **15908** and **15910** may tag each data as realtime or non-realtime in the traffic priority indicator based on the preprogrammed traffic priority configuration. In some aspects, classification module **15904** may therefore classify data packets in **16008** as real-time or non-realtime data based on the traffic priority indicator, which may reflect the preprogrammed traffic priority configuration of each application.

In some aspects, applications **15908** and **15910** may tag data packets with application identification information. For example, application **15908** and application **15910** may be assigned application IDs (e.g., externally, such as by an online application store, developer, or another source of the application, or locally, such as by terminal device **13602**). The application ID of applications **15908** and **15910** may uniquely identify each application. Accordingly, in some aspects where classification module **15904** is configured to consider user-priority in identifying critical traffic, classification module **15904** may receive user input that identifies a user-priority application (e.g., application **15908**) and identify the application ID of the user-priority application. Classification module **15904** may therefore check the application identification information tagged on data packets to determine whether the data packets originated from a user-priority application. In some aspects, classification module **15904** may store a list of application IDs of priority applications and check whether application identification information of a given data packet matches any application ID in the list. In some aspects, classification module **15904** may therefore classify data packets as user-priority or non-user priority traffic in **16008** based on application identification information tagged to the data packets.

In some aspects, applications **15908** and **15910** may tag data packets with service indicators. As indicated above, applications **15908** and **15910** may tag data packets with a service indicator such as a Type of Service (TOS) or Differentiated Services Code Point (DSCP) in the IP header. If a user has specified a user-priority service (e.g., a general class of applications), classification module **15904** may identify data packets of the user-priority service by checking service indicators such as TOS or DSCP for a given data packet to determine whether the data packet is associated with a user-priority service. For example, in some aspects where a user indicates (via user input) a user-priority service, classification module **15904** may identify a service indicator (such e.g., as one or specific ToS and/or DSCP values) that are associated with the user-priority service. When classifying traffic in **16008,** classification module **15904** may compare the service indicators of a data packet to the service indicators of user-priority services. If the service indicator matches a service indicator of a user-priority service, classification module **15904** may classify the data packet as critical traffic.

In some aspects, at least one of applications **15908** and **15910** may not tag data packets with metadata that indicates whether the data packets are realtime traffic and/or user-priority traffic. Classification module **15904** may therefore classify the data packets in **16008** based on other 'inferred' information. For example, classification module **15904** may evaluate the traffic profile of the data packets produced by each of applications **15908** and **15910** in order to estimate whether applications **15908** and **15910** are realtime or non-realtime applications. For example, classification module **15904** may evaluate the data plane packet inter-arrival (the time between successively arriving downlink packets) and packet inter-send (the time between successively sent uplink packets) times for applications **15908** and **15910,** where realtime traffic can be expected to have low inter-arrival and inter-send times (e.g., average below some threshold) and non-realtime traffic can be expected to have higher inter-arrival and inter-send times (e.g., average above some threshold).

In the exemplary scenario introduced above regarding application **15908** and application **15910,** classification module **15904** may evaluate the inter-send/arrival times for application **15908** by monitoring the data packets originating and terminating at application **15908** and evaluate the inter-send/arrival times for application **15910** by monitoring the data packets originating and terminating at application **15910.** Classification module **15904** may therefore identify which application generated each data packet. After identifying the originating application of the data packets, classification module **15904** may evaluate parameters such as the inter-send/arrival times of data packets for applications **15908** and **15910** in order to obtain an inter-send and inter-arrival time measurement (e.g., an average) for each application. Classification module **15904** may then compare the inter-send and inter-arrival times to predefined thresholds to determine whether applications **15908** and **15910** are realtime applications or non-realtime applications. In the exemplary scenario introduced above, the inter-send and inter-arrival times for application **15908** may fall below the predefined threshold; consequently, classification module **15904** may classify application **15908** as a realtime application. Conversely, the inter-send and inter-arrival times for application **15910** may exceed the predefined threshold; consequently, classification module **15904** may classify application **15910** as a non-realtime application. After classifying a given application as realtime or non-realtime, classification module **15904** may apply the classification uniformly to all traffic associated with the application.

In some aspects, classification module **15904** may utilize connection endpoint information such as IP, port, and socket information to classify traffic. For example, each data connection may terminate at a socket, which may be a logical endpoint of an IP connection. Each socket may be identified as a '5-tuple' that is defined by an IP source address, IP destination address, source port number, destination port number, and protocol. Classification module **15904** may therefore be able to classify the traffic received at each socket as realtime or non-realtime traffic (e.g., based on inter-send/arrival times). Classification module **15904** may then apply the realtime or non-realtime classification of a given socket to all traffic associated with the socket.

In some aspects, classification module **15904** may also utilize predefined information of port number assignments to classify realtime and non-realtime traffic. For example, certain port numbers may be associated with certain protocols or applications. For example, certain ports (by port number) may be assigned (e.g., via a predefined relationship) to email-related protocols such as Internet Message Access Protocol (IMAP), Post Office Protocol (POP), or Simple Mail Transfer Protocol (SMTP). Classification module **15904** may then be able to determine that traffic on these ports is email traffic, which may be non-realtime. Other ports may be assigned to file transfer protocols such as File Transfer Protocol (FTP), which classification module **15904** may classify as non-realtime traffic. Other ports may be assigned to realtime traffic protocols such as Real-time Transport Protocol (RTP) or Real Time Streaming Protocol (RTSP), which classification module **15904** may classify as non-realtime traffic. Other ports may be assigned to web-based traffic protocols such as HyperText Transfer Protocol (HTTP), which may be either realtime or non-realtime traffic. In some aspects, classification module **15904** may perform deeper inspection on traffic from HTTP ports in order to determine whether the traffic is realtime or non-realtime.

In some aspects, classification module **15904** may utilize predefined information of port number assignments to classify user-priority and non-user-priority traffic. As certain port numbers noted above may be associated with certain services, such as email services, file transfer services, realtime streaming services, etc. Classification module **15904** may therefore classify traffic on certain port numbers as being associated with a user-priority service (and thus user-priority traffic) if the port number is associated with a user-priority service specified by a user.

In some aspects, classification module **15904** may utilize other inferred information to classify applications **15908** and **15910** as realtime or non-realtime in **16008.** For example, classification module **15904** may apply traffic pattern evaluation techniques and/or packet inspection techniques to classify applications **15908** and **15910** as realtime or non-realtime. For example, classification module **15904** may evaluate source/destination Access Point Names (APNs) and/or IP addresses (which may identify data networks **13904** and **13906**) obtained via packet inspection and classify applications **15908** and **15910** based on which data networks applications **15908** and **15910** are communicating with. For example, certain data networks may be associated with realtime services while other data networks may be associated with non-realtime services; accordingly, classification module **15904** may classify applications **15908** and **15910** based on information about the counterpart data networks. In some aspects, classification module **15904** may utilize more advanced traffic pattern analysis, such as techniques based on heuristic approaches, machine learning support vector machines, etc., that can classify traffic as realtime or non-realtime and/or as user-priority or non-user-priority.

In some aspects, classification module **15904** may utilize a combination of explicit information (e.g., traffic priority indicators, service indicators, port numbers, etc.) and inferred information (e.g., inter-send/arrival times, machine learning, packet inspection, etc.) in **16008** to classify the data packets of applications **15908** and **15910** as realtime or non-realtime. For example, in some aspects classification module **15904** may not be able to classify a given data packet as realtime/non-realtime or user-priority/non-user-priority based on a traffic priority indicator, service indicator, or port number associated with the packet. Classification module **15904** may then utilize inferred information to classify the data packet, such as by measuring an inter-send/arrival time associated with the data packet (e.g., on a stream of packets that includes the data packet), performing machine learning on the data packet (e.g., on a stream of packets that includes the data packet), performing deep packet inspection on the packet, etc. Classification module **15904** may therefore utilize any such information to classify data packets as realtime/non-realtime and/or user-priority/non-user-priority.

In some aspects, classification module **15904** may perform classification in **16008** parallel to the other processes of method **16000.** For example, classification module **15904** may evaluate data packets from applications **15908** and **15910** over an extended time period (e.g., to classify applications **15908** and **15910** as realtime/non-realtime and/or user-priority/non-user-priority via inferred information) which may overlap with one or more other processes of method **16000.**

In some aspects, a user may also provide user input to classification module **15904** that specifies a hierarchical priority of multiple applications or services. For example, a user may provide user input that 'ranks' applications or services according to user-priority. For example, a user may specify that a first application has the highest user-priority, a second application has the second-highest user-priority, a third application has the third-highest user-priority, etc. In another example, a user may specify that that e.g., email services (e.g., email applications) are the highest priority, multimedia streaming services are the second-highest priority, etc. Classification module **15904** may therefore classify data packets in **16008** as critical or non-critical based on varying degrees of criticality. For example, in some aspects classification module **15904** may classify data packets as the most critical, other data packets as the second-most critical, other data packets as the third-most critical, etc.

Classification module **15904** may therefore have various different techniques for classifying data packets as realtime vs. non-realtime traffic and/or user-priority vs. non-user-priority traffic in **16008.** In some aspects where classification module **15904** is configured to classify realtime traffic as critical traffic (and not classify user-priority traffic as critical traffic), classification module **15904** may only perform realtime vs. non-realtime classification and subsequently classify realtime traffic as critical traffic and non-realtime traffic as non-critical traffic in **16008.** In some aspects where classification module **15904** is configured to classify user-priority traffic as critical traffic (and not classify realtime traffic as critical traffic), classification module **15904** may only perform user-priority vs. non-user-priority classification and subsequently classify user-priority traffic as critical traffic and non-user-priority traffic as non-critical traffic in **16008.** In some aspects where classification module **15904** is configured to classify both realtime traffic and user-priority traffic as critical traffic, classification module **15904** may perform realtime vs. non-realtime classification and user-priority vs. non-user-priority classification. Classification module **15904** may then classify realtime traffic and user-priority traffic as critical traffic and non-realtime traffic and non-user-priority traffic as non-critical traffic in **16008.**

After classifying data packets as critical or non-critical with classification module **15904** in **16008,** processing module **15912** may apply traffic restrictions based on critical and non-critical data packets with traffic control module **15902** in **16010.** As previously indicated, processing module **15912** may aim to reduce or manage the temperature of terminal device **13602** by restricting traffic. In order to avoid interrupting critical traffic (realtime or user priority) with such traffic restrictions, processing module **15912** may focus the traffic restriction on non-critical traffic. Accordingly, traffic control module **15902** may be configured to restrict the non-critical traffic in **16010** and avoid restricting the critical traffic.

In various aspects, traffic control module **15902** may implement the traffic restrictions with various different techniques. In some aspects, traffic control module **15902** may determine that there is only non-critical traffic, such as if classification module **15904** classifies the data packets of both applications **15908** and **15910** (e.g., all pending/waiting data packets) as non-critical traffic. Accordingly, in exemplary scenarios where there is only non-critical traffic and no critical traffic, traffic control module **15902** may enter the transmission components of terminal device **13602** (one or more of antenna system **13702,** RF transceiver **13704,** and baseband modem **13706**) into a sleep or low-power state. If the transmission components of terminal device **13602** are already in a sleep or low-power state, traffic control module **15902** may keep the transmission components in the sleep or low-power state. Traffic control module **15902** may then buffer the non-critical traffic while the transmission components are in the sleep or low-power state, which may allow the heat of terminal device **13602** to dissipate and cause terminal device **13602** to drop in temperature. Traffic control module **15902** may therefore apply the traffic restrictions in **16010** by 'throttling' the non-critical traffic, e.g., delaying transmission of the non-critical traffic.

In some aspects, traffic control module **15902** may continue to buffer the non-critical traffic for a predefined throttling period as part of the traffic restrictions in **16010,** such as in the order of milliseconds, seconds or minutes, and subsequently re-activate the transmission components to transmit the non-critical traffic after the throttling period has expired. Traffic control module **15902** may also have received and buffered further non-critical traffic during the throttling period and, after the expiry of the throttling period, may then transmit the buffered traffic. In some aspects, traffic control module **15902** may continue to periodically implement throttling periods in **16010,** where traffic control module **15902** may deactivate (sleep or low-power state) the transmission components for the duration of the throttling period and buffer any further traffic. Traffic control module **15902** may then transmit the buffered traffic after each throttling period has expired and enter into another throttling period. Transmission control module **15902** may therefore employ throttling with a throttling period in the traffic restrictions of **16010.**

In some aspects, traffic control module **15902** may prematurely terminate the throttling period when any critical traffic is received. For example, traffic control module **15902** may deactivate the transmission components and buffer incoming non-critical data (e.g., received from classification module **15904**) during the throttling period in **16010.** If traffic control module **15902** then receives data packets that are classified as critical traffic by classification module **15904,** traffic control module **15902** may terminate the throttling period and transmit the buffered data non-critical traffic and the newly received critical traffic.

In some aspects, traffic control module **15902** may receive both critical and non-critical traffic from classification module **15904.** Traffic control module **15902** may then focus traffic restrictions in **16010** on non-critical traffic and avoid interruption of critical traffic. For example, traffic control module **15902** may act as a scheduler and transmit critical traffic as soon as it arrives from classification module **15904.** Traffic control module **15902** may therefore avoid interrupting critical traffic. However, traffic control module **15902** may restrict transmission of non-critical traffic, such as by throttling, which may consequently reduce the heat accumulation of terminal device **13602** on account of the reduced transmission volume. For example, in some aspects traffic control module **15902** may delay non-critical traffic for a predefined throttling period (e.g., in the order of milliseconds, seconds, or minutes), thus throttling the non-critical. Traffic control module **15902** may then buffer the non-critical traffic while continuing to transmit the critical traffic, which may reduce heat accumulation. After the throttling period has expired, traffic control module **15902** may transmit the buffered non-critical traffic. In some aspects, traffic control module **15902** may periodically repeat the throttling period by repeatedly delaying and buffering non-critical traffic for the duration of the throttling period before transmitting the buffered non-critical data at the expiry of the throttling period.

In some aspects, traffic control module **15902** may apply the traffic restrictions in **16010** by reducing the periodicity of certain repetitive non-critical traffic (which may be another form of throttling as transmission of the non-critical traffic is delayed). For example, application **15910** may be an application that 'syncs' a counterpart server (e.g., data network **13906**) in order to update application data, such as an email application, messaging application, weather application, stock trading application, etc. Such applications may periodically request sync procedures with the counterpart server. Classification module **15904** may classify such sync requests as non-critical traffic in **16008** (e.g., the requests are not realtime traffic and/or application **15910** is not a user-priority application; if application **15910** is a user-priority application, classification module **15904** may classify sync requests as critical traffic). Traffic control module **15902** may therefore throttle sync requests in order to reduce transmission volume. In some aspects, traffic control module **15902** may increase the sync period, such as by only transmitting one sync request for every two sync requests received at traffic control module **15902.** In some aspects, traffic control module **15902** may completely restrict periodic sync procedures by not sending any periodic sync requests. In some aspects, traffic control module **15902** may only transmit sync requests when the sync request is triggered by a user and may not transmit periodic sync requests that are triggered automatically by application **15910.**

In some aspects, traffic control module **15902** may be implemented as part of controller **13710,** for example as a scheduler. For example, traffic control module **15902** may implement the traffic restrictions in **16110** as part of the cellular protocol stack and accordingly may buffer and control traffic at the protocol-stack layers (e.g., MAC layer). Traffic control module **15902** may then be configured to perform throttling at the modem-level, which may enable more 'fine-grained' throttling. In some aspects, traffic control module **15902** may be implemented as part of application processor **13712.** For example, traffic control module **15902** may be implemented as part of the modem driver executed by application processor **13712,** and accordingly may buffer and control data traffic at the application layer. Traffic control module **15902** may then be configured to perform throttling at the application-level, which may enable more 'coarse' throttling. In some aspects, traffic control module **15902** may have access to more memory for buffering throttled data when implemented at application processor **13712** than in baseband modem **13706.** In some aspects traffic control module **15902** may be partially implemented at both application processor **13712** and baseband modem **13706,** and may be configured to perform application-level throttling and modem-level throttling.

In some aspects where a user provides a hierarchical priority for applications and/or services, traffic control module **15902** may apply traffic restrictions in **16010** based on the hierarchical priority. For example, classification module **15904** may classify data packets based on the hierarchical priority, e.g., most critical, second-most critical, etc. Traffic control module **15902** may then vary the level of traffic restrictions based on the criticality level in **16010.** For example, traffic control module **15902** may apply the least throttling (e.g., shortest delay) to most critical traffic, the second-least throttling to the second-most critical traffic, etc., and the most throttling (e.g., longest delay) to the least critical (e.g., non-critical) traffic.

Traffic control module **15902** may therefore execute the traffic restrictions in **16010** based on the classification of data packets (by classification module **15904**), which may indicate whether the data packets are critical (e.g., realtime and/or user-priority) or non-critical (e.g., non-realtime and/or non-user priority) traffic. In various aspects, traffic control module **15902** may apply throttling to non-critical traffic by delaying transmission of the non-critical traffic. As traffic control module **15902** may selectively apply traffic restrictions, e.g., by focusing the restriction on non-critical traffic while continuing to transmit critical traffic without traffic restrictions, traffic control module **15902** may reduce heat accumulation at terminal device **13602** and avoid overheating.

Terminal control module **15902** may continue to apply traffic restrictions in **16010.** In some aspects, traffic control module **15902** may terminate traffic restrictions in **16010** based on input from detection module **15906.** For example, detection module **15902** may continue monitoring temperature data provided by sensor **13718** and checking whether the temperature is above the temperature threshold. If the temperature remains above the temperature threshold, detection module **15906** may continue to instruct traffic control module **15902** to apply traffic restrictions. If the temperature falls below the temperature threshold, detection module **15906** may instruct traffic control module **15902** to terminate traffic restrictions. In some aspects, detection module **15906** may utilize a different temperature threshold for deactivating traffic restrictions (e.g., a deactivation temperature threshold that is less than the activation temperature threshold) for activating traffic restrictions, such as for hysteresis thresholding. In some aspects, detection module **15906** may deactivate traffic restriction when the temperature measurements provided by sensor **13718** fall below and remain below the deactivation temperature threshold (which may be the same or different from the activation temperature threshold) for a predefined deactivation period.

Processing module **15912** may therefore apply traffic restrictions until the temperature of terminal device **13602** falls to manageable levels. In some aspects, processing module **15912** may continue to repeat method **16000** (e.g., indefinitely or for a definite time period) and may cycle between activating and deactivating traffic restrictions based on whether the temperature of terminal device **13602** is less than or greater than one or more temperature thresholds (e.g., a single activation/deactivation threshold or an activation and deactivation threshold pair).

In some aspects, processing module **15912** may also progressively scale the level of traffic restrictions based on the temperature measurement data provided by sensor **13718.** For example, detection module **15906** may utilize multiple temperature thresholds in **16004,** where each temperature threshold maps to a predefined traffic restriction level. For example, detection module **15906** may utilize e.g., three temperature thresholds and may compare the temperature measurement data provided by sensor **13718** to the three temperature thresholds in **16004.** If the temperature measurement is less than the first temperature threshold (the lowest temperature threshold), detection module **15906** may instruct traffic control module **15902** to perform normal traffic control in **16006.** If the temperature measurement is greater than the first temperature threshold but less than the second temperature threshold (the middle temperature threshold), detection module **15906** may instruct traffic control module **15902** to restrict traffic at a first traffic restriction level. If the temperature measurement is greater than the second temperature threshold but less than the third temperature threshold (the highest temperature threshold), detection module **15906** may instruct traffic control module **15902** to restrict traffic at a second traffic restriction level. If the temperature measurement is greater than the third temperature threshold, detection module **15906** may instruct traffic control module **15902** to restrict traffic at a third traffic restriction level. The number of temperature thresholds and restriction levels is exemplary and may be scalable to any number.

The traffic restriction levels may progress in terms of restrictiveness (the specifics may be configurable). For example, the first traffic restriction level may throttle (e.g., delay) non-realtime traffic for a first throttling period, the second traffic restriction level may throttle non-realtime traffic for a second throttling period, and the third traffic restriction level may throttle non-realtime traffic for a third throttling period, where the third throttling period may be the longest throttling period and the first throttling period may be the shortest throttling period. Processing module **15912** may therefore progressively restrict non-realtime traffic to a greater degree as the temperature of terminal device **13602** increases.

In some aspects, traffic control module **15902** may also apply the traffic restriction levels to critical traffic. For example, the second or third traffic restriction level may also throttle critical traffic by a throttling period (that is e.g., less than the throttling period for non-critical traffic, which may therefore focus the traffic restrictions on non-critical traffic). In some aspects detection module **15906** may use a temperature threshold that may be a cutoff threshold that indicates that severe overheating may occur and, if the temperature exceeds the cutoff threshold, may instruct traffic control module **15902** to apply traffic restrictions (throttling) to both critical and non-critical traffic. In some aspects, processing module **15912** may utilize a continuous range instead of the discrete range provided by the temperature thresholds, where the restriction levels applied by traffic control module **15902** may progressively increase in a continuous manner with temperature.

FIG. **161** shows method **16100,** which processing module **15912** may be configured to execute in accordance with some aspects of this disclosure to detect and respond to power-constrained scenarios. As will be detailed, processing module **15912** may execute method **16100** in an analogous manner as to method **16000** using remaining battery power at power supply **13716** in place of temperature measurements from sensor **13718.** As shown in FIG. **161,** detection module **15906** may monitor the remaining battery power of terminal device **13602** in **16102.** Accordingly, detection module **15906** may monitor the remaining battery power of power supply **13716.** Detection module **15906** may therefore continuously or periodically (e.g., with a fixed measurement period) monitor the remaining battery power of terminal device **13602** in **16102.**

Detection module **15906** may then determine in **16104** whether terminal device **13602** is power-constrained in **16104.** For example, detection module **15906** may compare the remaining battery power obtained in **16102** with a battery power threshold. If the remaining battery power is below the battery power threshold, detection module **15906** may determine that terminal device **13602** is not power-constrained, e.g., that terminal device **13602** has sufficient remaining battery power. Traffic control module **15902** may then apply normal traffic control in **16106** and accordingly may not apply any restrictions to data transmissions. In the exemplary scenario introduced above regarding applications **15908** and **15910,** traffic control module **15902** may continue to execute data transfer for applications **15908** and **15910** in a normal manner, such as by executing data transfer for applications **15908** and **15910** according to the appropriate communication protocols and/or according to the QoS requirements of applications **15908** and **15910.**

If detection module **15906** determines that the temperature is above the battery power threshold, detection module **15906** may determine that terminal device **13602** is power-constrained and continue to **16108,** where classification module **15904** may classify incoming traffic (e.g., provided by applications **15908** and **15910**) as critical traffic or non-critical traffic. The number of applications detailed herein (e.g., two) is exemplary and may be scalable to any number of applications.

Classification module **15904** may implement any of a variety of techniques to classify the traffic of applications **15908** and **15910** as critical or non-critical traffic. For example, in some aspects classification module **15904** may classify realtime traffic as critical traffic and non-realtime traffic as non-critical traffic. In some aspects, classification module **15904** may classify user-priority traffic as critical traffic and non-user priority traffic as non-critical traffic. In some aspects, classification module **15904** may consider realtime vs. non-realtime in identifying critical traffic without considering user-priority vs. non-user priority. In some aspects, classification module **15904** may consider user-priority vs. non-user priority in identifying critical traffic, without considering user-priority vs non-user priority. In some aspects, classification module **15904** may consider both realtime vs. non-realtime and user-priority vs. non-user priority in identifying critical traffic.

For example, in some aspects, a user may select via user input whether classification module **15904** considers only one of or both of realtime and user-priority in identifying critical traffic. For example, classification module **15904** may receive user input that specifies user instructions as to whether classification module **15904** should consider realtime and/or user-priority in identifying critical traffic. In some aspects, classification module **15904** may be preprogrammed to consider only one of realtime or user-priority or both of realtime and user-priority in identifying critical traffic. In some aspects, classification module **15904** may be configured to consider only realtime in identifying critical traffic unless a user provides user input that indicates user-priority of certain applications or services and, if a user provides user input that indicates user-priority of certain applications or services, may be configured to consider only user-priority or may be configured to consider both user-priority and realtime.

In some aspects where classification module **15904** is configured to classify traffic based on user-priority, a user may provide user input (e.g., prior to or during method **16100)** that indicates applications and/or services that are user-priority. For example, in some aspects a user may provide user input to classification module **15904** that specifies one or more applications (e.g., applications **15908** or **15910**) that are user-priority applications. Classification module **15904** may then record application identification information (such as an application ID) for each user-priority application. In some aspects, a user may provide user input to classification module **15904** that specifies one or more services that are user-priority applications, where each service may correspond to a general class of applications.

For example, a user may wish to prioritize messaging applications. Instead of identifying each of the messaging applications individually, the user may provide user input to classification module **15904** that specifies that messaging services are user-priority. Classification module **15904** may then consider traffic for messaging applications as user-priority traffic. In another example, a user may wish to prioritize multimedia streaming applications. Instead of identifying each multimedia streaming application individually, the user may provide user input to classification module **15904** that specifies that multimedia streaming services are user-priority. Classification module **15904** may then consider traffic for messaging applications as user-priority traffic. Classification module **15904** may record user-priority services specified by a user input.

Classification module **15904** may therefore be configured in **16108** to classify data packets as either critical or non-critical based on criteria related to realtime and/or user-priority. Classification module **15904** may use a variety of different information and techniques to classify data packets. For example, in some aspects applications **15908** and **15910** may be configured to provide metadata that indicates characteristics of the data packets that are generated by applications **15908** and **15910.** For example, applications **15908** and **15910** may be executed on application processor **13712** as dedicated applications that interface with controller **13710** via the Operating System (OS) of application processor **13712** and a modem driver with baseband modem **13706.** Applications **15908** and **15910** may therefore generate uplink data packets (which may be e.g., IP packets) and provide the data packets to controller **13710** (via the OS and modem driver) for transmission. Controller **13710** may process the data packets according to the user-plane cellular protocol stack protocols and provide the resulting uplink data to physical layer processing module **13708** for radio transmission via RF transceiver **13704** and antenna system **13702.**

In some aspects, applications **15908** and **15910** may 'tag' data packets (e.g., provided to the OS and modem driver) with a traffic priority indicator that indicates whether the data packets are realtime or non-realtime. For example, applications **15908** and **15910** may tag data packets with a Type of Service (TOS) or Differentiated Services Code Point (DSCP) in the IP header that indicates the QoS of the data packet. Classification module **15904** may therefore check the traffic priority indicators of the data packets provided by applications **15908** and **15910** to determine whether the data packets are realtime or non-realtime. In some aspects, classification module **15904** may check the traffic priority indicator of each data packet to classify each data packet as realtime traffic or non-realtime traffic. For example, certain applications may generate some data packets that are realtime traffic and other data packets that are non-realtime traffic, such as a multimedia streaming application that provides streaming traffic (realtime traffic) and signaling traffic (non-realtime traffic). Accordingly, applications **15908** and **15910** may tag each data packet with a traffic priority indicator that indicates whether each data packet is realtime or non-realtime. Classification module **15904** may then classify each data packet (regardless of the originating application) as realtime or non-realtime traffic based on the traffic priority indicator.

In some aspects, applications **15908** and **15910** may be preprogrammed as either a realtime application or a non-realtime application. Applications **15908** and **15910** may then be configured to tag each uplink data packet with a traffic priority indicator that indicates the preprogrammed traffic priority configuration. Accordingly, regardless of whether the data packet is realtime or non-realtime, applications **15908** and **15910** may tag each data as realtime or non-realtime in the traffic priority indicator based on the preprogrammed traffic priority configuration. In some aspects, classification module **15904** may therefore classify data packets in **16108** as real-time or non-realtime data based on the traffic priority indicator, which may reflect the preprogrammed traffic priority configuration of each application.

In some aspects, applications **15908** and **15910** may tag data packets with application identification information. For example, application **15908** and application **15910** may be assigned application IDs (e.g., externally, such as by an online application store, developer, or another source of the application, or locally, such as by terminal device **13602**). The application ID of applications **15908** and **15910** may uniquely identify each application. Accordingly, in some aspects where classification module **15904** is configured to consider user-priority in identifying critical traffic, classification module **15904** may receive user input that identifies a user-priority application (e.g., application **15908**) and identify the application ID of the user-priority application. Classification module **15904** may therefore check the application identification information tagged on data packets to determine whether the data packets originated from a user-priority application. In some aspects, classification module **15904** may store a list of application IDs of priority applications and check whether application identification information of a given data packet matches any application ID in the list. In some aspects, classification module **15904** may therefore classify data packets as user-priority or non-user priority traffic in **16108** based on application identification information tagged to the data packets.

In some aspects, applications **15908** and **15910** may tag data packets with service indicators. As indicated above, applications **15908** and **15910** may tag data packets with a service indicator such as a Type of Service (TOS) or Differentiated Services Code Point (DSCP) in the IP header. If a user has specified a user-priority service (e.g., a general class of applications), classification module **15904** may identify data packets of the user-priority service by checking service indicators such as ToS or DSCP for a given data packet to determine whether the data packet is associated with a user-priority service. For example, in some aspects where a user indicates (via user input) a user-priority service, classification module **15904** may identify a service indicator (such e.g., as one or specific ToS and/or DSCP values) that are associated with the user-priority service. When classifying traffic in **16108,** classification module **15904** may compare the service indicators of a data packet to the service indicators of user-priority services. If the service indicator matches a service indicator of a user-priority service, classification **15904** may classify the data packet as critical traffic.

In some aspects, at least one of applications **15908** and **15910** may not tag data packets with metadata that indicates whether the data packets are realtime traffic and/or user-priority traffic. Classification module **15904** may therefore classify the data packets in **16108** based on other 'inferred' information. For example, classification module **15904** may evaluate the traffic profile of the data packets produced by each of applications **15908** and **15910** in order to estimate whether applications **15908** and **15910** are realtime or non-realtime applications. For example, classification module **15904** may evaluate the data plane packet inter-arrival (the time between successively arriving downlink packets) and packet inter-send (the time between successively sent uplink packets) times for applications **15908** and **15910,** where realtime traffic can be expected to have low inter-arrival and inter-send times (e.g., average below some threshold) and non-realtime traffic can be expected to have higher inter-arrival and inter-send times (e.g., average above some threshold).

In the exemplary scenario introduced above regarding application **15908** and application **15910,** classification module **15904** may evaluate the inter-send/arrival times for application **15908** by monitoring the data packets originating and terminating at application **15908** and evaluate the inter-send/arrival times for application **15910** by monitoring the data packets originating and terminating at application **15910.** Classification module **15904** may therefore identify which application generated each data packet. After identifying the originating application of the data packets, classification module **15904** may evaluate parameters such as the inter-send/arrival times of data packets for applications **15908** and **15910** in order to obtain an inter-send and inter-arrival time measurement (e.g., an average) for each application. Classification module **15904** may then compare the inter-send and inter-arrival times to predefined thresholds to determine whether applications **15908** and **15910** are realtime applications or non-realtime applications. In the exemplary scenario introduced above, the inter-send and inter-arrival times for application **15908** may fall below the predefined threshold; consequently, classification module **15904** may classify application **15908** as a realtime application. Conversely, the inter-send and inter-arrival times for application **15910** may exceed the predefined threshold; consequently, classification module **15904** may classify application **15910** as a non-realtime application. After classifying a given application as realtime or non-realtime, classification module **15904** may apply the classification uniformly to all traffic associated with the application.

In some aspects, classification module **15904** may utilize connection endpoint information such as IP, port, and socket information to classify traffic as critical or non-critical. For example, each data connection may terminate at a socket, which may be a logical 'endpoint' of an IP connection. Each socket may be identified as a '5-tuple' that is defined by an IP source address, IP destination address, source port number, destination port number, and protocol. Classification module **15904** may therefore be able to classify the traffic received at each socket as realtime or non-realtime traffic (e.g., based on inter-send/arrival times). Classification module **15904** may then apply the realtime or non-realtime classification of a given socket to all traffic associated with the socket.

In some aspects, classification module **15904** may also utilize predefined information of port number assignments to classify realtime and non-realtime traffic. For example, certain port numbers may be associated with certain protocols or applications. For example, certain ports (by port number) may be assigned (e.g., via a predefined relationship) to email-related protocols such as Internet Message Access Protocol (IMAP), Post Office Protocol (POP), or Simple Mail Transfer Protocol (SMTP). Classification module **15904** may then be able to determine that traffic on these ports is email traffic, which may be non-realtime. Other ports may be assigned to file transfer protocols such as File Transfer Protocol (FTP), which classification module **15904** may classify as non-realtime traffic. Other ports may be assigned to realtime traffic protocols such as Real-time Transport Protocol (RTP) or Real Time Streaming Protocol (RTSP), which classification module **15904** may classify as non-realtime traffic. Other ports may be assigned to web-based traffic protocols such as HyperText Transfer Protocol (HTTP), which may be either realtime or non-realtime traffic. In some aspects, classification module **15904** may perform deeper inspection on traffic from HTTP ports in order to determine whether the traffic is realtime or non-realtime.

In some aspects, classification module **15904** may utilize predefined information of port number assignments to classify user-priority and non-user-priority traffic. As certain port numbers noted above may be associated with certain services, such as email services, file transfer services, realtime streaming services, etc. Classification module **15904** may therefore classify traffic on certain port numbers as being associated with a user-priority service (and thus user-priority traffic) if the port number is associated with a user-priority service specified by a user.

In some aspects, classification module **15904** may utilize other inferred information to classify applications **15908** and **15910** as realtime or non-realtime in **16108.** For example, classification module **15904** may apply traffic pattern evaluation techniques and/or packet inspection techniques to classify applications **15908** and **15910** as realtime or non-realtime. For example, classification module **15904** may evaluate source and/or destination Access Point Names (APNs) and/or IP addresses (which may identify data networks **13904** and **13906**) obtained via packet inspection and classify applications **15908** and **15910** based on which data networks applications **15908** and **15910** are communicating with. For example, certain data networks may be associated with realtime services while other data networks may be associated with non-realtime services; accordingly, classification module **15904** may classify applications **15908** and **15910** based on information about the counterpart data networks. In some aspects, classification module **15904** may utilize more advanced traffic pattern analysis, such as techniques based on heuristic approaches, machine learning, support vector machines, etc., that can classify traffic as realtime or non-realtime and/or as user-priority or non-user-priority.

In some aspects, classification module **15904** may utilize a combination of explicit information (e.g., traffic priority indicators, service indicators, port numbers, etc.) and inferred information (e.g., inter-send/arrival times, machine learning, packet inspection, etc.) in **16108** to classify the data packets of applications **15908** and **15910** as realtime or non-realtime. For example, in some aspects classification module **15904** may not be able to classify a given data packet as realtime/non-realtime or user-priority/non-user-priority based on a traffic priority indicator, service indicator, or port number associated with the packet. Classification module **15904** may then utilize inferred information to classify the data packet, such as by measuring an inter-send/arrival time associated with the data packet (e.g., on a stream of packets that includes the data packet), performing machine learning on the data packet ((e.g., on a stream of packets that includes the data packet), performing deep packet inspection on the packet, etc. Classification module **15904** may therefore utilize any such information to classify data packets as realtime/non-realtime and/or user-priority/non-user-priority.

In some aspects, classification module **15904** may perform classification in **16108** parallel to the other processes of method **16100.** For example, classification module **15904** may evaluate data packets from applications **15908** and **15910** over an extended time period (e.g., to classify applications **15908** and **15910** as realtime/non-realtime and/or user-priority/non-user-priority via inferred information) which may overlap with one or more other processes of method **16100.**

In some aspects, a user may also provide user input to classification module **15904** that specifies a hierarchical priority of multiple applications or services. For example, a user may provide user input that 'ranks' applications or services according to user-priority. For example, a user may specify that a first application has the highest user-priority, a second application has the second-highest user-priority, a third application has the third-highest user-priority, etc. In another example, a user may specify that that e.g., email services (e.g., email applications) are the highest priority, multimedia streaming services are the second-highest priority, etc. Classification module **15904** may therefore classify data packets in **16208** as critical or non-critical based on varying degrees of criticality. For example, in some aspects classification module **15904** may classify data packets as the most critical, other data packets as the second-most critical, other data packets as the third-most critical, etc.

Classification module **15904** may therefore have various different techniques for classifying data packets as realtime vs. non-realtime traffic and/or user-priority vs. non-user-priority traffic in **16108.** In some aspects where classification module **15904** is configured to classify realtime traffic as critical traffic (and not user-priority traffic as critical traffic), classification module **15904** may only perform realtime vs. non-realtime classification and subsequently classify realtime traffic as critical traffic and non-realtime traffic as non-critical traffic in **16108.** In some aspects where classification module **15904** is configured to classify user-priority traffic as critical traffic (and not realtime traffic as critical traffic), classification module **15904** may only perform user-priority vs. non-user-priority classification and subsequently classify user-priority traffic as critical traffic and non-user-priority traffic as non-critical traffic in **16108.** In some aspects where classification module **15904** is configured to classify both realtime traffic and user-priority traffic as critical traffic, classification module **15904** may perform realtime vs. non-realtime classification and user-priority vs. non-user-priority classification. Classification module **15904** may then classify realtime traffic and user-priority traffic as critical traffic and non-realtime traffic and non-user-priority traffic as non-critical traffic in **16108.**

After classifying data packets as realtime or non-realtime with classification module **15904** in **16108,** processing module **15912** may apply traffic restrictions based on critical and non-critical data packets with traffic control module **15902** in **16110.** As previously indicated, processing module **15912** may aim to reduce or manage the temperature of terminal device **13602** by restricting traffic. In order to avoid interrupting critical traffic (realtime or user priority) with such traffic restrictions, processing module **15912** may focus the traffic restriction on non-critical traffic. Accordingly, traffic control module **15902** may be configured to restrict the non-critical traffic in **16110** and avoid restricting the critical traffic.

In various aspects, traffic control module **15902** may implement the traffic restrictions with any of a variety of different techniques. In some aspects, traffic control module **15902** may determine that there is only non-critical traffic, such as if classification module **15904** classified the data packets of both applications **15908** and **15910** (e.g., all pending/waiting data packets) as non-critical traffic. Accordingly, in exemplary scenarios where there is only non-critical traffic and no critical traffic, traffic control module **15902** may enter the transmission components of terminal device **13602** (one or more of antenna system **13702,** RF transceiver **13704,** and baseband modem **13706**) into a sleep or low-power state. If the transmission components of terminal device **13602** are already in a sleep or low-power state, traffic control module **15902** may keep the transmission components in the sleep or low-power state. Traffic control module **15902** may then buffer the non-critical traffic while the transmission components are in the sleep or low-power state, which may conserve battery power at power supply **13716.** Traffic control module **15902** may therefore apply the traffic restrictions in **16110** by 'throttling' the non-critical traffic, e.g., delaying transmission of the non-critical traffic.

In some aspects, traffic control module **15902** may continue to buffer the non-critical traffic for a predefined throttling period as part of the traffic restrictions in **16110,** such as in the order of milliseconds, seconds or minutes, and subsequently re-activate the transmission components to transmit the non-critical traffic after the throttling period has expired. Traffic control module **15902** may also have received and buffered further non-critical traffic during the throttling period and, after the expiry of the throttling period, may then transmit the buffered traffic. In some aspects, traffic control module **15902** may continue to periodically implement throttling periods in **16110,** where traffic control module **15902** may deactivate (sleep or low-power state) the transmission components for the duration of the throttling period and buffer any further traffic. Traffic control module **15902** may then transmit the buffered traffic after each throttling period has expired and enter into another throttling period. Transmission control module **15902** may therefore employ throttling with a throttling period in the traffic restrictions of **16110.**

In some aspects, traffic control module **15902** may prematurely terminate the throttling period when any critical traffic is received. For example, traffic control module **15902** may deactivate the transmission components and buffer incoming non-critical data (e.g., received from classification module **15904**) during the throttling period in **16110.** If traffic control module **15902** then receives data packets that are classified as critical traffic by classification module **15904,** traffic control module **15902** may terminate the throttling period and transmit the buffered data non-critical traffic and the newly received critical traffic.

In some aspects, traffic control module **15902** may receive both critical and non-critical traffic from classification module **15904.** Traffic control module **15902** may then focus traffic restrictions in **16110** on non-critical traffic and avoid interruption of critical traffic. For example, traffic control module **15902** may act as a scheduler and transmit critical traffic as soon as it arrives from classification module **15904.** Traffic control module **15902** may therefore avoid interrupting critical traffic. However, traffic control module **15902** may restrict transmission of non-critical traffic, such as by throttling, which may consequently reduce the power consumption of terminal device **13602** on account of the reduced transmission volume. For example, in some aspects traffic control module **15902** may delay non-critical traffic for a predefined throttling period (e.g., in the order of milliseconds, seconds, or minutes), thus throttling the non-critical traffic. Traffic control module **15902** may then buffer the non-critical traffic while continuing to transmit the critical traffic, which may reduce power consumption. After the throttling period has expired, traffic control module **15902** may transmit the buffered non-critical traffic. In some aspects, traffic control module **15902** may periodically repeat the throttling period by repeatedly delaying and buffering non-critical traffic for the duration of the throttling period before transmitting the buffered non-critical data at the expiry of the throttling period.

In some aspects, traffic control module **15902** may apply the traffic restrictions in **16110** by reducing the periodicity of certain repetitive non-critical traffic (which may be another form of throttling as transmission of the non-critical traffic is delayed). For example, application **15910** may be an application that 'syncs' a counterpart server (e.g., data network **13906**) in order to update application data, such as an email application, messaging application, weather application, stock trading application, etc. Such applications may periodically request sync procedures with the counterpart server. Classification module **15904** may classify such sync requests as non-critical traffic in **16108** (e.g., the requests are not realtime traffic and/or application **15910** is not a user-priority application; if application **15910** is a user-priority application, classification module **15904** may classify sync requests as critical traffic) Traffic control module **15902** may therefore throttle sync requests in order to reduce transmission volume. In some aspects, traffic control module **15902** may increase the sync period, such as only transmitting one sync request for every two sync requests received at traffic control module **15902.** In some aspects, traffic control module **15902** may completely restrict periodic sync procedures by not sending any periodic sync requests. In some aspects, traffic control module **15902** may only transmit sync requests when the sync request is triggered by a user and may not transmit periodic sync requests that are triggered automatically by application **15910.**

In some aspects, traffic control module **15902** may be implemented as part of controller **13710,** for example as a scheduler. For example, traffic control module **15902** may implement the traffic restrictions in **16110** as part of the cellular protocol stack and accordingly may buffer and control traffic at the protocol-stack layers (e.g., MAC layer). Traffic control module **15902** may then be configured to perform throttling at the modem-level, which may enable more 'fine-grained' throttling. In some aspects, traffic control module **15902** may be implemented as part of application processor **13712.** For example, traffic control module **15902** may be implemented as part of the modem driver executed by application processor **13712,** and accordingly may buffer and control data traffic at the application layer. Traffic control module **15902** may then be configured to perform throttling at the application-level, which may enable more 'coarse' throttling. In some aspects, traffic control module **15902** may have access to more memory for buffering throttled data when implemented at application processor **13712** than in baseband modem **13706.** In some aspects traffic control module **15902** may be partially implemented at both application processor **13712** and baseband modem **13706,** and may be configured to perform application-level throttling and modem-level throttling.

In some aspects where a user provides a hierarchical priority for applications and/or services, traffic control module **15902** may apply traffic restrictions in **16110** based on the hierarchical priority. For example, classification module **15904** may classify data packets based on the hierarchical priority, e.g., most critical, second-most critical, etc. Traffic control module **15902** may then vary the level of traffic restrictions based on the criticality level in **16110.** For example, traffic control module **15902** may apply the least throttling (e.g., shortest delay) to most critical traffic, the second-least throttling to the second-most critical traffic, etc., and the most throttling (e.g., longest delay) to the least critical (e.g., non-critical) traffic.

Traffic control module **15902** may therefore execute the traffic restrictions in **16110** based on the classification of data packets (by classification module **15904),** which may indicate whether the data packets are critical (e.g., realtime and/or user-priority) or non-critical (e.g., non-realtime and/or non-user priority) traffic. In various aspects, traffic control module **15902** may apply throttling to non-critical traffic by delaying transmission of the non-critical traffic. As traffic control module **15902** may selectively apply traffic restrictions, e.g., by focusing the restriction on non-critical traffic while continuing to transmit critical traffic without traffic restrictions, traffic control module **15902** may reduce heat accumulation at terminal device **13602** and avoid overheating.

Terminal control module **15902** may continue to apply traffic restrictions in **16110.** In some aspects, traffic control module **15902** may terminate traffic restrictions in **16110** based on input from detection module **15906.** For example, detection module **15902** may continue monitoring the remaining battery power of power supply **13716** and checking whether the remaining battery power is below the battery power threshold. If the remaining battery power remains below the battery power threshold (e.g., if terminal device **13602** has not been connected to charging power supply), detection module **15906** may continue to instruct traffic control module **15902** to apply traffic restrictions. If terminal device **13602** is connected to a charging power supply, the remaining battery power of power supply **13716** may begin to rise. In some aspects, detection module **15906** may instruct traffic control module **15902** to terminate traffic restrictions as soon as power supply **13716** is charging. In some aspects, detection module **15906** may instruct traffic control module **15902** to terminate restrictions when the remaining battery power level rises above the battery power threshold. In some aspects, detection module **15906** may utilize a different battery power threshold (e.g., a deactivation battery power threshold that is higher than the activation battery power threshold) for deactivating traffic restrictions, such as for hysteresis thresholding. In some aspects, detection module **15906** may deactivate traffic restriction when the remaining battery power of power supply **13716** rises above and remains above the deactivation battery power threshold (which may the same or different from the activation battery power threshold) for a predefined deactivation period.

In some aspects, processing module **15912** may also progressively scale the level of traffic restrictions based on the remaining battery power of power supply **13716.** For example, detection module **15906** may utilize multiple battery power thresholds in **16104,** where each battery power threshold maps to a predefined traffic restriction level. For example, detection module **15906** may utilize e.g., three battery power thresholds and may compare the remaining battery power to the three battery power thresholds in **16104.** If the remaining battery power is greater than the first battery power threshold (the highest battery power threshold), detection module **15906** may instruct traffic control module **15902** to perform normal traffic control in **16106.** If the remaining battery power is less than the first battery power threshold but greater than the second battery power threshold (the middle battery power threshold), detection module **15906** may instruct traffic control module **15902** to restrict traffic at a first traffic restriction level. If the remaining battery power is less than the second battery power threshold but greater than the third battery power threshold (the lowest battery power threshold), detection module **15906** may instruct traffic control module **15902** to restrict traffic at a second traffic restriction level. If the remaining battery power is less than the third battery power threshold, detection module **15906** may instruct traffic control module **15902** to restrict traffic at a third traffic restriction level. The number of battery power thresholds and restriction levels is exemplary and may be scalable to any number.

The traffic restriction levels may progress in terms of restrictiveness (the specifics may be configurable). For example, the first traffic restriction level may throttle (e.g., delay) non-realtime traffic for a first throttling period, the second traffic restriction level may throttle non-realtime traffic for a second throttling period, and the third traffic restriction level may throttle non-realtime traffic for a third throttling period, where the third throttling period may be the longest throttling period and the first throttling period may be the shortest throttling period. Processing module **15912** may therefore progressively restrict non-realtime traffic to a greater degree as the temperature of terminal device **13602** increases.

In some aspects, traffic control module **15902** may also apply the traffic restriction levels to critical traffic. For example, the second or third traffic restriction level may also throttle critical traffic by a throttling period (that is e.g., less than the throttling period for non-critical traffic, which may therefore focus the traffic restrictions on non-critical traffic). In some aspects detection module **15906** may use a battery power threshold that may be a cutoff threshold that indicates that there is very low battery power (e.g., terminal device **13602** may be in danger of shutting down and/or under-voltage conditions that occur during peak battery current transients due to resistive losses on power supply lines). If the remaining battery power falls below the cutoff threshold, detection module **15906** may instruct traffic control module **15902** to apply traffic restrictions (throttling) to both critical and non-critical traffic. In some aspects, processing module **15912** may utilize a continuous range instead of the discrete range provided by the battery power thresholds, where the restriction levels applied by traffic control module **15902** may progressively increase in a continuous manner with temperature.

Processing module **15912** may therefore apply traffic restrictions until power supply **13716** runs out of power, until power supply **13716** is connected to a charging power supply, or until power supply **13716** is connected to a charging power supply and the remaining battery power exceeds a threshold. In some aspects, processing module **15912** may continue to repeat method **16100** (e.g., indefinitely or for a definite time period) and may cycle between activating and deactivating traffic restrictions based on whether the remaining battery power of terminal device **13602** is less than or greater than one or more battery power thresholds (e.g., a single activation/deactivation threshold or an activation and deactivation threshold pair).

In some aspects, terminal device **13602** may be configured to implement method **16000** and not be configured to implement method **16100.** In some aspects, terminal device **13602** may be configured to implement method **16100** and not be configured to implement method **16000.**

In some aspects, terminal device **13602** may be configured to consider both temperature and remaining battery power in applying traffic restrictions. FIG. **162** shows method **16200,** which processing module **15912** may apply to restrict traffic based on remaining battery and temperature in accordance with some aspects. As shown in FIG. **162,** detection module **15906** may monitor remaining battery power and temperature in **16202.** Detection module **15906** may therefore track the remaining battery power and the temperature of terminal device **13602** over time. Detection module **15906** may compare the remaining battery power and temperature respectively to a battery power threshold and a temperature threshold in **16204** to determine whether terminal device **13602** is power- or temperature-constrained. In some aspects, detection module **15906** may determine in **16204** whether terminal device **13602** is both power-constrained and thermal constrained, such as if the remaining battery power is less than the battery power threshold and the temperature is greater than the temperature threshold. Processing module **15912** may then proceed to **16206** to apply normal traffic control with traffic control module **15902** if terminal device **13602** is not both power-constrained and thermal-constrained. If detection module **15906** determines that terminal device **13602** is both power-constrained and thermal-constrained in **16204,** processing module **15912** may continue to **16208.**

In some aspects, detection module **15906** may determine in **16204** whether terminal device **13602** is at least one of power-constrained or thermal-constrained in **16204,** such as if the remaining battery power is less than the battery power threshold or if the temperature is greater than the temperature threshold. If one or both of the power-constrained and thermal-constrained threshold criteria are met, processing module **15912** may continue to **16208.** If terminal device **13602** is neither power-constrained nor thermal-constrained, processing module **15912** may proceed to **16206** to apply normal traffic control with traffic control module **15902** if terminal device **13602.** If terminal **13602** is one or both of power-constrained or thermal-constrained, processing module **15912** may continue to **16208.**

Detection module **15906** may therefore perform **16204** based on whether terminal device **13602** is power-constrained and thermal-constrained, or based on whether terminal device **13602** is power-constrained or thermal-constrained. Classification module **16208** may then classify data packets as critical or non-critical traffic (e.g., real-time/non-realtime and/or user-priority/non-user-priority), and may utilize any of the techniques previously detailed regarding **16008** and **16108.** Traffic control module **15902** may then apply traffic restrictions to critical and non-critical traffic in **16210.** In some aspects, traffic control module **15902** may apply traffic restrictions in **16210** that are fixed regardless of the remaining battery power or temperature, e.g., that do not progressively scale based on a discrete or continuous range. In some aspects, traffic control module **15902** may apply traffic restrictions in **16210** that progressively scale based on the remaining battery power or temperature. For example, if terminal device **13602** is only one of power-constrained or thermal-constrained, traffic control module **15902** may apply one-dimensional progressive scaling as detailed above regarding **16010** (discrete or continuous progressive scaling based on temperature) or **16110** (discrete or continuous progressive scaling based on remaining batter power). If terminal device **13602** is both power-constrained and thermal constrained, traffic control module **15902** may apply two-dimensional progressive scaling. For example, in some aspects traffic control module **15902** may utilize a two-dimensional lookup table that receives remaining battery power and temperature as inputs and produces a traffic restriction level (for one or both of realtime and non-realtime traffic) as output. The lookup table may be predefined and/or preprogrammed at traffic control module **15902.** As the lookup table may produce traffic restriction levels based on remaining battery power and temperature, the traffic restriction levels provided as output may vary based on remaining battery power and temperature, where higher remaining battery power and lower temperatures may generally yield less restrictive traffic restrictions (e.g., shorter throttling periods) and lower remaining battery power and higher temperatures may generally yield more restrictive traffic restrictions (e.g., longer throttling periods).

Processing module **15912** may therefore apply thermal-constrained traffic restrictions (method **16000**), power-constrained traffic restrictions (**16100**), or thermal- and power-constrained traffic restriction (method **16200;** with traffic restrictions based on both remaining battery power and temperature or based on at least one of remaining battery power and temperature). The configurations of processing module **15912** may therefore provide a mechanism for terminal device **13602** to reduce or manage temperature in overheating scenarios and/or to reduce or manage power consumption in low battery power scenarios. Various aspects may therefore avoid overheating, potential electronic damage from overheating, and user discomfort from overheating when applied in thermal-constrained scenarios. These aspects may reduce power consumption and extend battery life when applied in power-constrained scenarios.

FIG. **163** shows an exemplary functional diagram according to some aspects. As shown in FIG. **163,** processing module **16302** may include applications **16304,** user-experience (UX)-driven classification module **16306,** networking stack module **16308,** modem queues/scheduler module **16310,** modem TX/RX module **16312,** and throttling control module **16314.** Processing module **16302** may interact with TX/RX module **16316,** sensors **16318,** and platform power state tracking module **16320.** In some aspects, processing module **16302** may include controller **13710** and application processor **13712;** accordingly, one or more of applications **16304,** user-experience (UX)-driven classification module **16306,** networking stack module **16308,** modem queues/scheduler module **16310,** and throttling control module **16314** may be a baseband controller or application processor component. Applications **16304,** user-experience (UX)-driven classification module **16306,** networking stack module **16308,** modem queues/scheduler module **16310,** modem TX/RX module **16312,** and throttling control module **16314** may be implemented as hardware-defined and/or software-defined modules. FIG. **163** illustrates processing module **16302** on a functional level; consequently, one or more of the components of processing module **16302** may be integrated into a common hardware and/or software element.

Applications **16304** may be applications executed on application processor **13712** of terminal device **13602.** Applications **16304** may therefore generate application-layer data for uplink transmission. Applications **16304** may provide the application-layer traffic to UX-driven classification module **16306.** UX-driven classification module **16306** may then classify the traffic from applications **16304** as critical or non-critical traffic. In some aspects, UX-driven classification module **16306** may be configured in the manner of classification module **15904.** In some aspects, UX-driven classification module **16306** may classify the traffic based on whether the traffic is realtime traffic or non-realtime traffic. In some aspects, UX-driven classification module **16306** may classify the traffic based on whether the traffic is user-priority or non-user priority, which a user of terminal device **13602** may provide via user input, e.g., user-priority applications and/or user-priority services. In some aspects, UX-driven classification module **16306** may classify the traffic based on a hierarchical priority, such as where a user of terminal device **13602** may provide a 'ranking' of applications and/or services according to user-priority. UX-driven classification module **16306** may also classify the traffic based on actual QoS feedback provided by throttling control module **16314.**

UX-driven classification module **16306** may generate classification metadata for data packets that indicates the criticality (e.g., critical, non-critical, or criticality level) of the data. UX-driven classification module **16306** may provide the classification metadata to throttling control module **16314** and networking stack module **16308.** UX-driven classification module **16306** may then provide the traffic to networking stack module **16306,** which may be uplink traffic. As shown in FIG. **163,** UX-driven classification module **16306** may also receive downlink traffic from networking stack module **16308.** In some aspects, UX-driven classification module **16306** may evaluate the downlink traffic in order to assist in classifying uplink traffic provided by applications **16304.** For example, UX-driven classification module **16306** may utilize the downlink traffic to obtain inferred information that may assist in classifying uplink traffic, such as in determining inter-send/arrival times, checking port numbers, performing deep packet inspection, etc. (e.g., in the manner of classification module **15904).**

Networking stack module **16308** may be configured to apply network stack protocols on downlink and uplink traffic. For example, networking stack module **16308** may apply TCP/IP protocols to uplink and downlink traffic. Networking stack module **16308** may then provide the traffic to modem queues/scheduler module **16310** along with the classification metadata.

Modem queues/scheduler module **16310** may be configured to manage traffic queues and perform scheduling for uplink and downlink traffic from terminal device **13602.** Modem queues/scheduler module **16310** may be configured to transmit uplink traffic under the control of throttling control module **16314,** which may render throttling decisions and instruct modem queues/scheduler module **16310** to transmit uplink traffic according to the throttling decisions. Modem queues/scheduler module **16310** may provide uplink traffic according to the queues and scheduling to modem TX/RX module **16312,** which may perform uplink processing and transmit the uplink traffic via TX/RX module **16316** (e.g., RF transceiver **13704** and antenna system **13702**). Modem TX/RX module **16312** may also perform downlink processing on downlink traffic received via TX/RX module **16316** and provide the downlink traffic to modem queues/scheduler module **16310.**

Throttling control module **16314** may be configured to receive input from UX-driven classification module **16306,** sensors and inputs **16318** (e.g., sensor **13718** and/or power supply **13716**), platform power state tracking module **16320,** and modem TX/RX module **16312.** In some aspects, throttling control module **16314** may be configured in the manner of detection module **15906.** Throttling control module **16314** may evaluate one or more of the inputs and determine whether to perform traffic restrictions and, if so, determine the level of traffic restrictions. Throttling control module **16314** may provide instructions to modem queues/scheduler module **16310,** which may be configured to enforce the traffic restrictions, such as by applying throttling to traffic.

In some aspects, throttling control module **16314** may monitor the temperature and/or remaining battery power of terminal device **13602** and apply the temperature and/or remaining battery power to render throttling decisions. For example, throttling module **16314** may receive temperature measurements from sensors and inputs **16318** (e.g., sensor **13718**) and/or remaining battery power levels from sensors and inputs **16318** (e.g., power supply **13716**). Throttling control module **16314** may then determine whether to institute throttling based on the temperature and/or remaining battery power. In some aspects, throttling control module **16314** may be configured to render throttling decisions based on temperature and/or remaining battery power in the manner detailed above regarding traffic control module **15902** and/or detection module **15906.**

In some aspects, throttling control module **16314** may also consider input from platform power state tracking module **16320** in rendering throttling decisions. The platform power state may indicate the current consumption of terminal device **13602.** For example, when a cover of terminal device **13602** (e.g., a screen cover) is open and/or a display of terminal device **13602** is on, the power consumption of terminal device **13602** may be significantly higher (e.g., several watts) than when the cover is closed and the display is off. In another example, baseband modem **13706** may have different power states, which may depend on whether baseband modem **13706** is in radio connected state, whether baseband modem **13706** is actively transmitting or receiving, etc. Throttling control module **16314** may consider such scenarios when rendering throttling decisions. For example, when the display is on, baseband modem **13706** may be actively transmitting and receiving. When the display is off, baseband modem **13706** may keep applications **16304** updated by periodically accessing the network and waking up for event triggers (e.g., messaging, voice calls, text messages, geofencing wake-up event, etc.).

In some aspects, throttling control module **16314** may also consider radio metadata from modem TX/RX module **16312.** For example, modem TX/RX module **16312** may provide radio metadata that indicates radio conditions and radio states. For example, modem TX/RX module **16312** may provide radio measurements (e.g., signal strength measurements, signal quality measurements, signal-to-noise ratio (SNR) measurements, etc.) to throttling control module **16314** that indicate radio conditions. Modem TX/RX module **16312** may also specify the current radio state (e.g., radio connected state, radio idle state, etc.) to throttling control module **16314.**

Throttling control module **16314** may therefore consider various inputs from sensors and inputs **16318,** platform power state tracking module **16320,** and modem TX/RX module **16312** in rendering throttling decisions for modem queues/scheduler module **16310** to execute. In some aspects, throttling control module **16314** may apply a cost metric to evaluate whether to institute throttling at modem queues/scheduler module **16310.** For example, throttling control module **16314** may consider the various inputs and evaluate the potential power cost to terminal device **13602** if modem queues/scheduler module **16310** institutes throttling. For example, in some aspects throttling control module **16314** may evaluate whether terminal device **13602** is close to temperature overheating limits (e.g., based on temperature measurements from input from sensors and inputs **16318** and an overheating threshold), throttling control module **16314** may determine that there is a high power cost for transmitting data and may consequently throttle traffic at modem queues/scheduler module **16310.** In some aspects, throttling control module **16314** may evaluate whether terminal device **13602** is close to low-battery (or brown-out) limits (e.g., based on remaining battery power levels from sensors and inputs **16318** and a battery power threshold). If throttling control module **16314** determines that terminal device **13602** is close to low-battery, throttling control module **16314** may determine that there is a high power cost for transmitting data and may consequently throttle traffic at modem queues/scheduler module **16310.**

In some aspects throttling control module **16314** may evaluate whether modem TX/RX module **16312** is in a low power-usage state as part of the cost metric, such as a radio idle state (e.g., Radio Resource Control (RRC) idle) or a discontinuous reception (DRX, including Connected DRX (C-DRX)) state. For example, if throttling control module **16314** determines that modem TX/RX module **16312** is currently in a low power-usage state (e.g., based on input from modem TX/RX state **16312** and/or platform power state tracking module **16320**) and that only low criticality traffic (e.g., non-critical traffic such as non-realtime or non-user-priority traffic or traffic assigned a low criticality level) is pending at modem queues/scheduler module **16310,** throttling control module **16314** may instruct modem queues/scheduler **16310** to throttle the pending traffic. Modem TX/RX module **16312** may therefore remain in the low power-usage state. In some aspects, throttling control module **16314** may instruct modem queues/scheduler **16310** to throttle non-critical traffic and, if there is critical traffic or critical traffic arrives from networking stack **16308,** to schedule and transmit critical traffic (which may include taking modem TX/RX module **16312** out of the low-low power-usage).

In some aspects, throttling control module **16314** may evaluate radio conditions provided by modem TX/RX module **16312** as part of the metric. For example, throttling control module **16314** may evaluate radio measurements provided by modem TX/RX module **16312** to determine whether modem TX/RX module **16312** is operating under poor radio conditions. As poor radio conditions may yield a low probability of successful transmission, modem TX/RX module **16312** may need to execute multiple retransmissions in order to successfully transmit data. More retransmissions may increase power usage. As a result, throttling control module **16314** may determine that there is a high power cost for transmitting data. Throttling control module **16314** may therefore instruct modem queues/scheduler module **16310** to throttle traffic.

As detailed above regarding traffic control module **15902,** in some aspects throttling control module **16314** may consider the criticality of traffic in the cost metric. Throttling control module **16314** may therefore consider classification metadata provided by UX-driven classification module **16306** that indicates the criticality of data. For example, in some aspects, if throttling control module **16314** determines that modem TX/RX module **16312** is already active (e.g., radio connected state) and critical data (classified by UX-driven classification module **16306**) is pending at modem queues/scheduler module **16310,** throttling control module **16314** may determine that there is a low power cost to transmit data. Accordingly, throttling control module **16314** may instruct modem queues/scheduler module **16310** to transmit data. In some aspects, throttling control module **16314** may instruct modem queues/scheduler module **16310** to transmit the critical traffic but throttle other non-critical traffic.

Throttling control module **16314** may be configured to quantitatively evaluate the cost metric based on one or more of criticality classification (e.g., realtime and/or user-priority), temperature, battery power, power states, and radio conditions. For example, in some aspects, throttling control module **16314** may calculate the cost metric based on one or more of these inputs and, based on the cost metric, trigger throttling of traffic at modem queues/scheduler module **16310.**

Different architectural configurations of processing module **16302** are within the scope of this disclosure. In some aspects, modem queues/scheduler module **16310** may be implemented as part of baseband modem **13706,** and may queue, schedule, and throttle traffic at the modem level. In some aspects, modem queues/scheduler module **16310** may be implemented as part of application processor **13712** and may queue, schedule, and throttle traffic at the application-level. For example, modem/queues scheduler module **16310** may be part of a modem driver for baseband modem **13706** executed at application processor **13712,** and may throttle traffic by buffering the traffic at the modem driver. In some aspects, implementing modem queues/scheduler module **16310** at application processor **13712** may be advantageous due to the greater memory capacity available at application processor **13712** compared to baseband modem **13706.** Accordingly, modem queues/scheduler module **16310** may have a greater capacity to buffer traffic during throttling when implemented at application processor **13712.** In some aspects, implementing modem queues/scheduler module **16310** at baseband modem **13706** may be advantageous as modem queues/scheduler module **16310** may be able to perform more 'fine-grained' throttling. In particular, instead of throttling application-level traffic, modem queues/scheduler module **16310** may be able to throttle modem-level traffic (e.g., at the MAC layer). In some aspects where modem queues/scheduler module **16310** is implemented at application processor **13712,** modem TX/RX module **16312** may feed radio metadata back to throttling control module **16314,** which may be implemented at application processor **13712** (or alternatively, if throttling control module **16314** is implemented at baseband modem **13706,** UX-driven classification module **16306** may need to provide the classification metadata to baseband modem **13706**). In some aspects where modem queues/scheduler module **16310** is implemented at baseband modem **13706,** throttling control module **16314** (which may be implemented at application processor **13712**) may feed throttling instructions to modem queues/scheduler module **16310** at modem **13706** (or alternatively, if throttling control module **16314** is implemented at baseband modem **13706,** UX-driven classification module **16306** may provide the classification metadata to baseband modem **13706**). In some aspects, modem queues/scheduler module **16310** may be implemented partially at application processor **13712** and baseband modem **13706.** For example, an application-level section of modem queues/scheduler module **16310** may perform throttling at the application level, e.g., by buffering and throttling traffic at a modem driver, while a modem-level section of modem queues/scheduler module **16310** may perform throttling at the modem level, e.g., by buffering and throttling traffic in the modem (e.g., at the MAC layer). The specific implementation of processing module **16302** may therefore be a system design issue and may vary depending on a variety of factors, including platform type (e.g., IoT and machine-to-machine (M2M) usage vs. client device usage such as PCs, tablets, smartphones, etc.).

These aspects may therefore provide aspects to trigger selective traffic throttling in response to power-constrained and/or thermal-constrained scenarios. Some aspects may identify realtime and/or user-priority traffic as critical traffic and non-realtime and/or non-user-priority traffic as non-critical traffic. These aspects may then focus throttling on the non-critical traffic by throttling the non-critical traffic more than the critical traffic.

FIG. **164** shows method **16400** of performing radio communications in accordance with some aspects. As shown in FIG. **164,** method **16400** includes determining that a terminal device is in a critical scenario based on a battery power or a temperature measurement of the terminal device (**16410**)**,** classifying data from one or more applications of the terminal device into critical traffic and non-critical traffic based on whether the data is user-priority traffic or realtime traffic (**16420**)**,** throttling the non-critical traffic relative to the critical traffic while the terminal device is in the critical scenario (**16430**), and terminating the throttling of the non-critical traffic in response to the terminal device exiting the critical scenario (**16440**)**.**

## 5 Enhanced Communication

FIG. **165** shows radio communication network **16500** in accordance with some aspects, which may include terminal devices **16502** and **16504** in addition to network access nodes **16510** and **16512.** Although certain aspects of this disclosure may describe certain radio communication network setting (such as an LTE, UMTS, GSM, other 3rd Generation Partnership Project (3GPP) networks, WLAN/Wi-Fi, Bluetooth, 5G, mmWave, etc.), the subject matter detailed herein is considered demonstrative in nature and may therefore be analogously applied to any other radio communication network, including other technologies either already developed or to be developed. The number of network access nodes and terminal devices in radio communication network **16500** is exemplary and is scalable to any amount.

Accordingly, in an exemplary cellular setting network access nodes **16510** and **16512** may be base stations (e.g., eNodeBs, NodeBs, Base Transceiver Stations (BTSs), etc.) while terminal devices **16502** and **16504** may be cellular terminal devices (e.g., Mobile Stations (MSs), User Equipments (UEs), etc.). Network access nodes **16510** and **16512** may therefore interface (e.g., via backhaul interfaces) with a cellular core network such as an Evolved Packet Core (EPC, for LTE), Core Network (CN, for UMTS), or other cellular core network, which may also be considered part of radio communication network **16500.** The cellular core network may interface with one or more external data networks. In an exemplary short-range setting, network access node **16510** and **16512** may be access points (APs, e.g., WLAN or Wi-Fi APs) while vehicles or terminal device **16502** and **16504** may be short range terminal devices (e.g., stations (STAs)). Network access nodes **16510** and **16512** may interface (e.g., via an internal or external router) with one or more external data networks.

Network access nodes **16510** and **16512** (and other network access nodes of radio communication network **16500** not explicitly shown in FIG. **165**) may accordingly provide a radio access network to terminal devices **16502** and **16504** (and other terminal devices of radio communication network **16500** not explicitly shown in FIG. **165**). In an exemplary cellular setting, the radio access network provided by network access nodes **16510** and **16512** may enable terminal devices **16502** and **16504** to wirelessly access the core network via radio communications. The core network may provide switching, routing, and transmit for traffic data related to terminal devices **16502** and **16504** and may provide access to various internal (e.g., control nodes, other terminal devices on radio communication network **16500,** etc.) and external data networks (e.g., data networks providing voice, text, multimedia (audio, video, image), and other Internet and application data). In an exemplary short-range setting, the radio access network provided by network access nodes **16510** and **16512** may provide access to internal (e.g., other terminal devices connected to radio communication network **16500**) and external data networks (e.g., data networks providing voice, text, multimedia (audio, video, image), and other Internet and application data).

The radio access network and core network (if applicable) of radio communication network **16500** may be governed by network protocols that may vary depending on the specifics of radio communication network **16500.** Such network protocols may define the scheduling, formatting, and/or routing of both user and control data traffic through radio communication network **16500,** which includes the transmission and reception of such data through both the radio access and core network domains of radio communication network **16500.** Accordingly, terminal devices **16502** and **16504** and network access nodes **16510** and **16512** may follow the defined network protocols to transmit and receive data over the radio access network domain of radio communication network **16500** while the core network may follow the defined network protocols to route data within and outside of the core network. Exemplary network protocols include LTE, UMTS, GSM, WiMAX, Bluetooth, Wi-Fi, mmWave, etc., any of which may be applicable to radio communication network **16500.**

FIG. **166** shows an exemplary internal configuration of terminal device **16502** in accordance with some exemplary aspects, which may include antenna system **16602,** radio frequency (RF) transceiver **16604,** baseband modem **16606** (including physical layer processing module **16608** and controller **16610**), application processor **16612,** memory **16614,** and power supply **16616.** Vehicle or terminal device **16502** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output (I/O) devices (display(s), keypad(s), touchscreen(s), speaker(s), external button(s), camera(s), microphone(s), etc.), etc.

Vehicle or terminal device **16502** may transmit and receive radio signals on one or more radio access networks. Baseband modem **16606** may direct such communication functionality of terminal device **16502** according to the communication protocols associated with each radio access network, and may execute control over antenna system **16602** and RF transceiver **16604** in order to transmit and receive radio signals according to the formatting and scheduling parameters defined by each communication protocol. Although various practical designs may include separate communication components for each supported radio access technology (e.g., a separate antenna, RF transceiver, physical layer processing module, and controller), for purposes of conciseness the configuration of terminal device **16502** shown in FIG. **166** depicts only a single instance of each such components.

Vehicle or terminal device **16502** may transmit and receive radio signals with antenna system **16602,** which may be a single antenna or an antenna array include multiple antennas and may additionally include analog antenna combination and/or beamforming circuitry. In the receive path (RX), RF transceiver **16604** may receive analog radio frequency signals from antenna system **16602** and perform analog and digital RF front-end processing on the analog radio frequency signals to produce digital baseband samples (e.g., In-Phase/Quadrature (IQ) samples) to provide to baseband modem **16606.** RF transceiver **16604** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **16604** may receive digital baseband samples from baseband modem **16606** and perform analog and digital RF front-end processing on the digital baseband samples to produce analog radio frequency signals to provide to antenna system **16602** for wireless transmission. RF transceiver **16604** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **16606** to produce the analog radio frequency signals for wireless transmission by antenna system **16602.** Baseband modem **16606** may control the RF transmission and reception of RF transceiver **16604,** including specifying the transmit and receive radio frequencies for operation of RF transceiver **16604.**

As shown in FIG. **166,** baseband modem **16606** may include physical layer processing module **16608,** which may perform physical layer (Layer 1) transmission and reception processing to prepare outgoing transmit data provided by controller **16610** for transmission via RF transceiver **16604** and prepare incoming received data provided by RF transceiver **16604** for processing by controller **16610.** Physical layer processing module **16608** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Although not explicitly shown in FIG. **166,** physical layer processing module **16608** may include a physical layer controller configured to control the various hardware and software processing components of physical layer processing module **16608** in accordance with physical layer control logic defined by the communications protocol for the relevant radio access technologies. Furthermore, while physical layer processing module **16608** is depicted as a single component in FIG. **166,** physical layer processing module **16608** may collectively include separate sections of physical layer processing components where each respective section is, for example, dedicated to the physical layer processing of a particular radio access technology.

Vehicle or terminal device **16502** may be configured to operate according to one or more radio access technologies, which may be directed by controller **16610.** Controller **16610** may thus be responsible for controlling the radio communication components of terminal device **16502** (antenna system **16602,** RF transceiver **16604,** and physical layer processing module **16608**) in accordance with the communication protocols of each supported radio access technology, and accordingly may represent the Access Stratum and Non-Access Stratum (NAS) (also encompassing Layer 2 and Layer 3) of each supported radio access technology. Controller **16610** may be structurally embodied as a protocol processor configured to execute protocol software (retrieved from a controller memory) and subsequently control the radio communication components of terminal device **16502** in order to transmit and receive communication signals in accordance with the corresponding protocol control logic defined in the protocol software.

Controller **16610** may therefore be configured to manage the radio communication functionality of terminal device **16502** in order to communicate with the various radio and core network components of radio communication network **16500,** and accordingly may be configured according to the communication protocols for multiple radio communication networks. In some aspects, controller **16610** may be configured according to multiple cellular radio communication technologies, e.g., according to LTE, UMTS, and GSM. In some aspects, controller **16610** may be configured according to cellular radio communication technologies and short-range radio communication technologies, such as at least one of Wi-Fi or Bluetooth and at least one of LTE, UMTS, and GSM. Controller **16610** may either be a unified controller that is collectively responsible for all supported radio access technologies (e.g., LTE, UMTS, GSM, Bluetooth, Wi-Fi, etc.) or may include multiple separate controllers where each controller is a dedicated controller for a particular radio access technology (e.g., a dedicated LTE controller, a dedicated UMTS controller, a dedicated GSM controller, a dedicated Wi-Fi controller, a dedicated Bluetooth controller). Regardless, controller **16610** may be responsible for directing radio communication activity of terminal device **16502** according to the communication protocols of the supported radio communication networks. As previously noted regarding physical layer processing module **16608,** one or both of antenna system **16602** and RF transceiver **16604** may similarly be partitioned into multiple dedicated components that each respectively correspond to one or more of the supported radio access technologies. Depending on the specifics of each such configuration and the number of supported radio access technologies, controller **16610** may be configured to control the radio communication operations of terminal device **16502** in accordance with a master/slave RAT hierarchical or multi-SIM scheme.

Vehicle or terminal device **16502** may also include application processor **16612,** memory **16614,** and power supply **16612.** Application processor **16612** may be a CPU configured to execute various applications and/or programs of terminal device **16502** at an application layer of terminal device **16502,** such as an operating system (OS), a user interface (UI) for supporting user interaction with terminal device **16502,** and/or various user applications. The application processor may interface with baseband modem **16606** as an application layer to transmit and receive user data such as voice data, audio/video/image data, messaging data, application data, basic Internet/web access data, etc., over the radio network connection(s) provided by baseband modem **16606.** Although shown separately in FIG. **166,** this distinction highlights the differences between baseband modem **16606** and application processor **16612** on a functional level.

Accordingly, in some aspects baseband modem **16606** and application processor **16612** may be structurally separate, e.g., a separate baseband modem **16606** and a separate application processor **16612.** In some aspects, baseband modem **16606** and application processor **16612** may be structurally integrated, such as an integrated baseband modem/application processor **16606/16612.**

Memory **16614** may embody a memory component of terminal device **16502,** such as a hard drive or another such permanent memory device. Although not explicitly depicted in FIG. **166,** the various other components of terminal device **16502** shown in FIG. **166** may additionally each include integrated permanent and non-permanent memory components, such as for storing software program code, buffering data, etc.

Power supply **16616** may be an electrical power source that provides power to the various electrical components of terminal device **16502.** Depending on the design of terminal device **16502,** power supply **16616** may be a 'finite' power source such as a battery (rechargeable or disposable) or an 'indefinite' power source such as a wired electrical connection. Operation of the various components of terminal device **16502** may thus pull electrical power from power supply **16616.**

vehicle or terminal devices **16502** and **16504** may execute mobility procedures to connect to, disconnect from, and switch between available network access nodes of the radio access network of radio communication network **16500.** As each network access node of radio communication network **16500** may have a specific coverage area, terminal devices **16502** and **16504** may be configured to select and re-select between the available network access nodes in order to maintain a strong radio access connection with the radio access network of radio communication network **16500.** For example, terminal device **16502** may establish a radio access connection with network access node **16510** while terminal device **16504** may establish a radio access connection with network access node **16512.** In the event that the current radio access connection degrades, terminal devices **16502** or **16504** may seek a new radio access connection with another network access node of radio communication network **16500;** for example, terminal device **16504** may move from the coverage area of network access node **16512** into the coverage area of network access node **16510.** As a result, the radio access connection with network access node **16512** may degrade, which terminal device **16504** may detect via radio measurements such as signal strength or signal quality measurements of network access node **16512.** Depending on the mobility procedures defined in the appropriate network protocols for radio communication network **16500,** terminal device **16504** may seek a new radio access connection (which may be triggered at terminal device **16504** or by the radio access network), such as by performing radio measurements on neighboring network access nodes to determine whether any neighboring network access nodes can provide a suitable radio access connection. As terminal device **16504** may have moved into the coverage area of network access node **16510,** terminal device **16504** may identify network access node **16510** (which may be selected by terminal device **16504** or selected by the radio access network) and transfer to a new radio access connection with network access node **16510.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

FIG. **167** shows an exemplary internal configuration of a network access node such as network access node **16510** in accordance with some aspects. As shown in FIG. **167,** network access node **16510** may include antenna system **16702,** radio module **16704,** and communication module **16706** (including physical layer module **16708** and control module **16710**). Network access node **16510** may transmit and receive radio signals via antenna system **16702,** which may be an antenna array including one or more antennas. Radio module **16704** may perform transmit and receive RF processing to convert outgoing digital data from communication module **16706** into analog RF signals to provide to antenna system **16702** for radio transmission and to convert incoming analog RF signals received from antenna system **16702** into digital data to provide to communication module **16706.** Physical layer module **16708** may be configured to perform physical layer reception processing on digital data received from radio module **16704** to provide to control module **16710** and to perform physical layer transmission processing on digital data received from control module **16710** to provide to radio module **16704.** Control module **16710** may control the communication functionality of network access node **16510** according to the corresponding radio access protocols, e.g., LTE, which may include exercising control over antenna system **16702,** radio module **16704,** and physical layer module **16708.** Each of radio module **16704,** physical layer module **16708,** and control module **16710** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. In some aspects, radio module **16704** may be a radio transceiver including digital and analog radio frequency processing and amplification components. In some aspects, radio module **16704** may be a software-defined radio (SDR) component that includes a processor configured to execute software-defined instructions that specify radio frequency processing routines. In some aspects, physical layer module **16708** may include a processor and one or more hardware accelerators, wherein the processor is configured to control physical layer processing and offload certain processing tasks to the one or more hardware accelerators. In some aspects, control module **16710** may be a controller configured to execute software-defined instructions that specify upper-layer control functions. In some aspects, control module **16710** may be limited to radio communication protocol stack layer functions, while in other aspects control module **16710** may also be responsible for transport, internet, and application layer functions.

Network access node **16510** may interface with a core network and/or internet networks (directly/via a router or via the core network), which may be through a wired or wireless interface. Network access node **16510** may also interface with other network access nodes over a wired or wireless interface. Network access node **17002** may thus provide the conventional functionality of network access nodes in radio communication networks by providing a radio access network to enable served terminal devices to access desired communication data.

Radio communication networks or communication paths through such networks may be highly dynamic due to a variety of factors that impact radio communications. For example, terminal devices **16502** and **16504** may move (e.g., by a user) to various different positions relative to network access nodes **16510** and **16512,** which may affect the relative distances and radio propagation channels between terminal devices **16502** and **16504** and network access node **16510** and **16512.** The radio propagation channels may also vary due to factors unrelated to mobility such as interference, moving obstacles, and atmospheric changes. Additionally, local conditions at terminal device **16502** and **16504,** such as battery power, the use of multiple radio access technologies, varying user activity and associated data traffic demands, etc., may also impact radio communication. Radio communications may also be affected by conditions at network access nodes **16510** and **16512** in addition to the underlying core network, such as network load and available radio resources.

As previously indicated, in some aspects network access nodes **16510** and **16512** may interface with a core network e.g., to enable communication between terminal devices connected to different radio communication networks, for vehicles and terminal devices enable the access to cloud services, let vehicles and terminal devices benefit from high throughput of wireline core networks, etc. FIG. **168** shows an exemplary configuration in accordance with some aspects where network access node **16510** interfaces with core network **16802,** which may be a cellular core network. Core network **16802** may provide a variety of functions for operation of radio communication network **16500,** such as data routing, authenticating and managing users/subscribers, interfacing with external networks, and various network control tasks. Core network **16802** may therefore provide an infrastructure to route data between terminal device **16502** and various external networks such as data network **16804** and data network **16806.** Accordingly, terminal device **16502** may rely on the radio access network provided by network access node **16510** to wirelessly transmit and receive data with network access node **16510,** which may then provide the data to core network **16802** for further routing to external locations such as data networks **16804** and **16806** (which may be packet data networks (PDNs), or circuit-switched networks, or virtual circuit-switched networks, or hybrid packet-switched and circuit-switched networks, or internet servers, etc.). Vehicle or terminal device **16502** may therefore establish a data connection with data network **16804** and/or data network **16806** that relies on network access node **16510** and core network **16802** for data transfer and routing.

5.1 Enhanced Communication # 1

Power consumption may be an important consideration for terminal devices. For example, in some aspects terminal devices such as terminal device **16502** may operate on battery power, such as where power supply **16616** is a battery. Vehicle or terminal device **16502** may expend power in performing uplink and downlink communications, e.g., for uplink radio transmissions and processing-intensive decoding and demodulation during downlink communications. Vehicle or terminal device **16502** may also expend power for non-communication related purposes, such as to support various applications and services at application processor **16612.** As power supply **16616** may be finite or battery charging is limited e.g., using photovoltaic cells, etc., terminal device **16502** may gradually drain the remaining battery power of power supply **16616** and may require frequent charging or battery replacement. Conserving battery power and reducing power consumption may therefore extend battery life and reduce the frequency of charging, amount of charging and battery replacement. Alternatively, in some aspects terminal devices such as terminal device **16502** may operate on a fixed power supply, such as where power supply **16616** is a wired power supply such as an Alternating Current (AC) outlet, or an alternator/generator driven by an engine. In such cases, high power consumption by terminal device **16502** may increase power consumption costs to a user of terminal device **16502.** Power efficiency may therefore be a relevant property for terminal devices.

Various technologies such as IoT communications may place interest on power efficiency for terminal devices. For example, some IoT devices may target long-term (e.g., in the order of months or years, such as five to ten years) operation without recharging. Certain IoT devices may be implemented with non-rechargeable batteries (e.g., coin cell batteries and other configurations) and/or may be designed for operation in hard to reach areas. For example, IoT sensor networks may be deployed that include multiple IoT sensors that are designed to be positioned in sensor locations (which may be inconvenient to access or maintain, such as high ceilings above staircases, on top of buildings or in attics, inside of HVAC systems, etc.). Frequent recharging or battery replacement of the IoT sensors may therefore be both inconvenient and expensive, and for some use cases unfeasible, e.g., livestock monitoring, embedded sensors in plants, space applications, etc. Many IoT devices designed for a variety of different purposes may similarly target power-efficient aspects to help avoid the need for frequent maintenance.

According to an aspect of this disclosure, a terminal device may utilize an assisting device to relay communications to a network access node. To assist with reducing power consumption, the terminal device may utilize a reduced transmit power. The terminal device may also utilize a low-power waveform format to transmit to the assisting device, which may also reduce power consumption. The assisting device may receive the low-power format transmissions from the terminal device and relay the transmissions to the network access node. The assisting device may also handle channel reservation and contention procedures for the terminal device to enable the terminal device to perform collision-free transmissions to the assisting device.

Vehicles or terminal devices may transmit and receive radio communications directly with network access nodes. Vehicles or terminal devices may therefore utilize sufficient transmit power to ensure that uplink transmissions reach the target network access node. If a terminal device is far from the target network access node, the terminal device may therefore utilize a higher transmit power to compensate for pathloss-, shadowing-, and multipath-related attenuation in uplink transmissions. However, the use of high transmit powers may cause battery drain on terminal devices, which may result in low battery life and increased recharging or battery replacement.

Additionally, many radio communication technologies may utilize wideband physical layer waveforms. For example, various cellular broadband (e.g., LTE) and short-range (e.g., IEEE 802.11 Wi-Fi) radio communication technologies use wideband waveforms with a system bandwidth in the range of 20 MHz. Vehicles or terminal devices may expend power in both transmitting and receiving such wideband waveforms. For example, a terminal device transmitting and receiving a 20 MHz downlink waveform may expend more battery power than a terminal device that is transmitting and receiving a 5 MHz downlink waveform. Additionally, some wideband physical layer waveforms may have a high peak-to-average-power ratio (PAPR), which may lead to further power consumption for uplink transmissions.

Accordingly, in some aspects power consumption issues related to uplink transmit power and high-power physical layer waveforms may be alleviated by using an assisting device for forwarding low-power transmissions and managing coexistence-related issues for narrowband waveforms. The assisting device may forward low-power uplink transmissions from a terminal device to a destination network access node, and may enable the terminal device to utilize a low-power waveform format. Risk of transmission collisions with other coexisting devices may be reduced.

FIG. **169** shows an exemplary depiction of radio communication network **16500** in accordance with some aspects of the disclosure. As shown in FIG. **169,** radio communication network **16500** may include network access node **16510,** terminal device **16502,** and assisting device **16902.** In some aspects, terminal device **16502** may be structurally configured in the manner of FIG. **166,** and can include at least one or more of antenna system **16602,** an RF transceiver **16604,** a baseband modem **16606** (including a physical layer processing module **16608** and a controller **16610**), an application processor **16612,** a memory **16614,** and a power supply **16616.** In some aspects, network access node **16510** may be structurally configured in the manner of FIG. **167,** and can include at least one or more of an antenna system **16702,** a radio module **16704,** and a communication module **16706** (including a physical layer module **16708** and a control module **16710**). Accordingly, terminal device **16502** may aim to transmit and receive radio communications with network access node **16510** to exchange user and control data. For example, in an exemplary cellular radio communication setting network, network access node **16510** may interface with a core network (e.g., core network **16802** of FIG. **168**) that provides routing functions to enable terminal device **16502** to exchange user data with external data networks (e.g., data networks **16804** or **16806**). In an exemplary short-range communication setting, network access node **16510** may interface with external data networks (e.g., data networks **16804** or **16806**) via a router (which may be internal or external to network access node **16510**).

FIG. **170** shows an exemplary internal configuration of assisting device **16902** in accordance with some aspects. As shown in FIG. **170,** assisting device **16902** may include antenna system **17002,** radio module **17004,** and communication module **17006** (including physical layer module **17008** and control module **17010**). Assisting device **16902** may transmit and receive radio signals via antenna system **17002,** which may be an antenna array including one or more antennas. Radio module **17004** may perform transmit and receive RF processing to convert outgoing digital data from communication module **17006** into analog RF signals for antenna system **17002** to transmit and to convert incoming analog RF signals received from antenna system **17002** into digital data for communication module **17006.** Physical layer module **17008** may be configured to perform physical layer reception processing on digital data received from radio module **17004** to provide to control module **17010** and to perform physical layer transmission processing on digital data received from control module **17010** to provide to radio module **17004.** Control module **17010** may control the communication functionality of assisting device **16902** according to the corresponding radio access protocol, which may include exercising control over antenna system **17002,** radio module **17004,** and physical layer module **17008.** Each of radio module **17004,** physical layer module **17008,** and control module **17010** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

FIG. **171** depicts a diagram that illustrates aspects of a communications scheme. Network access node **16510** may oversee radio communications for various terminal devices and other nodes that are connected to network access node **16510,** such as terminal device **16502,** terminal device **16504,** and assisting device **16902.** Network access node **16510** may therefore transmit and receive radio signals with terminal device **16502,** terminal device **16504,** and assisting device **16902** according to a multiple access scheme that defines rules and parameters for performing multilateral communications. For example, in some aspects the communication nodes of radio communication **16500** (network access node **16510,** terminal device **16502,** terminal device **16504,** assisting device **16902,** and other network access nodes, terminal devices, and assisting devices not explicitly shown in FIG. **169**) may communicate according to a Wi-Fi radio communication technology. In some aspects, the communication nodes of radio communication network **16500** may communicate according to another short-range radio communication technology, such as Bluetooth. In some aspects, the communication nodes of radio communication network **16500** may communicate according to a cellular radio communication technology.

As shown in FIG. **171,** network access node **16510** may transmit downlink transmissions to terminal device **16502** on interface **17110.** In particular, communication module **16706** of network access node **16510** may transmit and receive signals with baseband modem **16606** of terminal device **16502** over a logical connection (e.g., a software-level connection) that uses radio module **16704,** antenna system **16702,** antenna system **16602,** and radio transceiver **16604** to for physical radio transmission and reception. Network access node **16510** and terminal device **16502** may transmit and receive signals over interface **17110** using a first waveform format, which may define a format for transmitting and receiving signals between network access node **16510** and terminal device **16502.** Network access node **16510** and terminal device **16502** may both be configured (e.g., with the internal components of **16702-16706** and **16602-16606)** to receive, process and decode, generate, and transmit signals according to the first waveform format.

As shown in FIG. **171,** network access node **16510** may transmit and receive signals with terminal device **16504** on interface **17108.** Communication module **16706** of network access node **16510** may transmit and receive signals with baseband modem **17106** of terminal device **16504** over a logical connection (e.g., a software-level connection) that uses radio module **16704,** antenna system **16702,** antenna system **17102,** and radio transceiver **17104** for physical radio transmission and reception. Network access node **16510** and terminal device **16504** may transmit and receive signals over interface **17108** using a second waveform format. Network access node **16510** and terminal device **16504** may both be configured (e.g., with the internal components of **16702-16706** and **17102-17106)** to receive, process and decode, generate, and transmit signals according to the second waveform format.

In some aspects, the first waveform format may be more power-efficient than the second waveform format. For example, in some aspects the first waveform format may have a narrower system bandwidth than the second waveform format. In some aspects, the first waveform format may be a narrowband waveform format and the second waveform format may be a wideband waveform format. In some aspects, the second waveform format may have a system bandwidth of e.g., 20 MHz, 40 MHz, 80 MHz, 160 MHz, etc., and the first waveform format may have a system bandwidth of e.g., 5 MHz, 2 MHz, 1 MHz, etc. In some aspects, the first waveform format may have a lower PAPR than the second waveform format.

Accordingly, network access node **16510** and terminal device **16502** may be configured to receive, process and decode, generate, and transmit signals according to the first waveform format. For example, antenna system **16602,** RF transceiver **16604,** and baseband modem **16606** of terminal device **16502** may be configured according to the first waveform format. In some aspects, radio module **16704** and/or antenna system **16702** of network access node **16510** may have a first section dedicated to first format transmission and reception (for use on interface **17110)** and a second section dedicated to second format transmission and reception (for use on interface **17108).** For example, in some aspects radio module **16704** may include first radio components (the first section) configured to perform first format transmission and reception and second radio components (the second section) configured to perform second format transmission and reception. In some aspects antenna system **16702** may include one or more first antennas (the first section) configured to perform first format transmission and reception and one or more second antennas (the second section) configured to perform second format transmission and reception, such as where the second format transmission uses MIMO techniques in a wider bandwidth of operation (e.g., 2x2 MIMO). In some aspects, radio module **16704** may include with radio components configured to perform both first format and second format transmission and reception. In some aspects, antenna system **16702** may include one or more antennas configured to perform both first format and second format transmission and reception. In addition to the first and second formats, it will be appreciated that network access node **16510** may be configured to process additional formats.

Terminal device **16502** may therefore receive first format transmissions (e.g., transmissions in the first waveform format) from network access node **16510** and process the received first format transmissions at antenna system **16602,** RF transceiver **16604,** and baseband modem **16606.** As terminal device **16502** may receive first format transmissions as opposed to second format transmissions (e.g., transmissions in the second waveform format), terminal device **16502** may consume less power performing downlink processing on the first format transmissions compared to what terminal device **16502** would consume if performing downlink processing on second format transmissions (e.g., less power than terminal device **16504** consumes processing second format transmissions). Accordingly, terminal device **16502** may be more power efficient. In some aspects, terminal device **16502** may have longer battery life, less frequent charging demands, less frequent battery maintenance demands, and/or less frequent battery replacement demands.

Terminal device **16502** may be configured to transmit uplink transmissions (in the first waveform format) to network access node **16510.** However, as previously indicated, terminal devices may expend an increased amount of power performing uplink transmission to network access nodes. The amount of expended power may be increased when a target network access node is located far from a transmitting terminal device. Accordingly, instead of transmitting uplink transmissions directly to network access node **16510,** terminal device **16502** may utilize assisting device **16902** as a relay. As shown in FIG. **171,** terminal device **16502** may transmit an uplink transmission (that is intended for network access node **16510)** to assisting device **16902** over interface **17112.** Baseband modem **16606** may generate and transmit the uplink transmission to assisting device **16902** over interface **17110** on a logical connection with RF transceiver **16604** and antenna system **16602,** which communication module **17006** of assisting device may receive with antenna system **17002** and radio module **17004.**

Communication module **17006** of assisting device **16902** may then receive the uplink transmission from terminal device **16502** (via antenna system **17002** and radio module **17004).** Communication module **17006** may then forward the uplink transmission to network access node **16510** over interface **17114** by transmitting the uplink transmission to communication module **16706** of network access node **16510** over a logical connection with radio module **17004** and antenna system **17002.** Network access node **16510** may then receive the forwarded uplink transmission (which originated at terminal device **16502)** at communication module **16706** via antenna system **3302** and radio module **16704.** In some aspects, assisting device **16902** may forward the uplink transmissions to network access node **16510** as first format transmissions. In some aspects, assisting device **16902** may forward the uplink transmissions to network access node **16510** as second format transmissions. For example, communication module **17006** may convert the first format uplink transmission received from terminal device **16502** into the second waveform format and transmit the transmission to network access node **16706** in the second waveform format.

Terminal device **16502** may reduce power consumption by transmitting the uplink transmission to network access node **16510** over a forwarding link that includes assisting device **16902,** e.g., by using assisting device **16902** as a relay node to transmit signals to network access node **16510.** According to some aspects, assisting device **16902** may be closer to terminal device **16502** than network access node **16510** (e.g., as in the exemplary scenario of FIG. **169),** so that terminal device **16502** can use a lower transmit power to transmit the uplink transmission to assisting device **16902** than terminal device **16502** would use if transmitting the uplink transmission directly to network access node **16510** (e.g., without using a forwarding link). Terminal device **16502** may therefore reduce power consumption by transmitting uplink transmissions to network access node **16510** via a forwarding link that includes assisting device **16902.**

In some aspects, baseband modem **16606** of terminal device **16502** may generate uplink transmissions based on the forwarding link provided by assisting device **16902** to network access node **16510.** For example, in some aspects baseband modem **16606** may generate header information for an uplink transmission that provides a network address of network access node **16510** as the intended destination. Communication module **17006** of assisting device **16902** may then receive the uplink transmission, read the header information, and identify network access node **16510** as the intended destination for the uplink transmission based on the network address included in the header information. Communication module **17006** may then transmit the uplink transmission to network access node **16510** based on the intended destination. In some aspects, communication module **17006** may transmit the uplink transmission to network access node **16510** using directional transmission techniques. For example, as communication module **17006** may identify that network access node **16510** is the intended destination, communication module **17006** may control antenna system **17002** to transmit the uplink transmission using beamsteering/beamforming based on the direction of network access node **16510** from assisting device **16902.** In some aspects, communication module **17006** may transmit the uplink transmission to network access node **16510** using transmit power control. For example, as communication module **17006** may identify that network access node **16510** is the intended destination, communication module **17006** may control radio module **17004** (e.g., a power amplifier component) to transmit the uplink transmission to network access node **16510** with a transmit power that depends on the distance between network access node **16510** and assisting device **16902.**

In some aspects, baseband modem **16606** of terminal device **16502** may generate header information for an uplink transmission that additionally or alternatively provides a network address of assisting device **16902** as the intended relay node. Communication module **17006** of assisting device **16902** may then receive the uplink transmission, read the header information, and determine that assisting device **16902** is the intended relay node. As communication module **17006** has identified that assisting device **16902** is the intended relay node, communication module **17006** may determine that assisting device **16902** should forward the uplink transmission. In some aspects, communication module **17006** may determine whether to forward received uplink transmission based on information in the uplink transmission that indicates an intended relay node. For example, if an uplink transmission indicates that assisting device **16902** is the intended relay node, communication module **17006** may forward the uplink transmission. Conversely, if an uplink transmission does not indicate that assisting device **16902** is the intended relay node, communication module **17006** may not forward the uplink transmission. In other aspects, it is possible that the assisting device need not be explicitly identified in order for communication module **17006** to forward the uplink transmission. For example, in some aspects communication module **17006** may forward the uplink transmission even if assisting device **16902** is not explicitly identified. Conversely, in some aspects communication module **17006** may only forward uplink transmissions if assisting device **16902** is explicitly identified. Due to the preset condition of the channel (e.g., NAV setting), communication module **17006** may refrain from forwarding received uplink transmissions until channel becomes available.

Assisting device **16902** may have greater power capacity than terminal device **16502.** For example, assisting device **16902** may be powered by an 'indefinite' power source such as a wired AC connection, or can be power by a large rechargeable or replaceable battery (e.g., as a primary source or as a backup source in case the wired AC connection is lost). Assisting device **16902** may be less power-constrained than terminal device 16502. Accordingly, assisting device **16902** may forward the uplink transmissions received from terminal device **16502** to network access node **16510** with a greater transmission power than terminal device **16502** used to transmit the uplink transmission to assisting device **16902.** In some aspects, communication module **17006** may receive the uplink transmission from terminal device **16502** and transmit the received uplink transmission to network access node **16510** (e.g., with greater transmission power than used by terminal device **16502).** In some aspects, communication module **17006** may demodulate and decode the uplink transmission (according to the first waveform format) received from terminal device **16502.** In doing so, communication module **17006** may perform error correction and recover the original uplink data (e.g., PHY layer data) transmitted by terminal device **16502.** Communication module **17006** may then re-encode and re-modulate the recovered uplink data and transmit the resulting uplink transmission to network access node **16510** (via radio module **17004** and antenna system **17002;** e.g., with a greater transmission power than terminal device **16502).** As communication module **17006** has corrected errors (incurred during radio transmission), network access node **16510** may receive the uplink transmissions with better error performance.

In some aspects, terminal device **16502** may be configured to transmit uplink transmissions to assisting device **16902** as first format transmissions. As previously indicated, first format transmission may incur less power consumption than second format transmission. Accordingly, in some aspects terminal device **16502** may be configured to receive downlink transmissions from network access node **16510** in the first waveform format or the second waveform format and to transmit uplink transmissions to network access node **16502** (via a relay node in assisting device **16902)** in the first waveform format.

As previously detailed, network access node **16510** may transmit and receive uplink and downlink second format transmissions with terminal device **16504.** As terminal device **16502** may transmit first format transmissions (e.g., to assisting device **16902** as part of a relay link to network access node **16510),** radio communication network **16500** may include both first format and second format transmissions. In some aspects, the use of both first format and second format transmissions in proximity may cause coexistence issues. For example, radio communication network **16500** may utilize a contention-based multiple access scheme in which the communication nodes of radio communication network **16500** may share a channel (or 'medium') by detecting whether any other communication nodes are transmitting before performing a transmission. If a communication node with a pending transmission detects that another communication node is transmitting, the communication node may wait until the channel is free (e.g., until no other communication nodes are transmitting) and execute the pending transmission).

In some aspects, radio communication network **16500** may utilize a Carrier Sense Multiple Access (CSMA) scheme. For example, radio communication network **16500** may utilize CSMA Collision Avoidance (CSMA/CA). Accordingly, the communication nodes of radio communication network **16500** (e.g., that form a Basic Service Set (BSS)) may perform carrier sensing to determine whether they are permitted to access the radio channel. For example, in an exemplary scenario terminal device **16504** may have pending uplink data scheduled for transmission to network access node **16510.** As the communication nodes of radio communication network **16500** may share the channel, terminal device **16504** may perform carrier sensing to determine whether the channel is 'busy', such as whether another communication node is currently transmitting on the channel. Terminal device **16504** may therefore listen to the channel for a predefined sensing window (e.g., a Distributed Coordination Function (DCF) Inter-frame Space (DIFS)). If terminal device **16504** does not detect any transmissions during the sensing window, e.g., if the channel is free, terminal device **16504** may immediately access the channel and transmit the pending uplink data. If terminal device **16504** detects transmissions during the sensing window, e.g., if the channel is busy, terminal device **16504** may perform a 'backoff' procedure before attempting to transmit again. In such a backoff procedure terminal device **16504** may continue listening to the channel until to the channel to determine when the detected transmission ends. Once the detected transmission ends, terminal device **16504** may listen to the channel for the duration of the sensing window. If terminal device **16504** detects another transmission during the sensing window, terminal device **16504** may again listen to the channel to determine when the detected transmission ends and continue listening to the channel for the sensing window.

If terminal device **16504** does not detect any further transmissions during the sensing window, terminal device **16504** may initiate a backoff counter (e.g., a randomly selected number of slots) and begin decrementing the backoff counter. Each time terminal device **16504** detects a transmission on the channel during the backoff counter, terminal device **16504** may pause the counter, wait until the detected transmission ends, listen for the duration of the sensing window, and continue the counter after a sensing window elapses following a detected transmission. When the backoff counter expires, terminal device **16504** may then access the channel and perform the transmission.

In some aspects, network access node **16510** may also be configured to perform an equivalent carrier sensing procedure to perform transmissions, which may be known as distributed-coordinated channel access (e.g., Distributed Coordination Function (DCF) in Wi-Fi). Network access node **16510** may alternatively be configured to have priority access to the channel by being allotted a shorter sensing window (and thus being able to access the channel first prior to the end of a transmission), which may be known as point-coordinated channel access (e.g., Point Coordination Function (PCF) in Wi-Fi). The terminal devices and network access nodes in a CSMA/CA scheme may therefore contend for access to the channel with one another by listening for transmissions (also known as a listen before talk (LBT) scheme), where each contending transmitter may avoid collisions by first listening to the channel and waiting to transmit (for at least a sensing window potentially in addition to a backoff counter) if any transmissions are detected.

Communication nodes operating in a CSMA/CA scheme may utilize certain techniques to detect other transmissions. For example, certain technologies may employ 'physical' carrier sensing and/or 'virtual' carrier sensing to detect transmissions during carrier sensing. In physical carrier sensing, a communication node such as terminal device **16504** may monitor the channel by receiving channel data and processing the channel data (e.g., a Clear Channel Assessment (CCA) in an exemplary Wi-Fi setting). In some aspects of physical carrier sensing, terminal device **16504** may perform energy detection (ED), which may involve determining whether the channel is busy based on the radio energy observed in the channel (which may be radio energy from other RATs, noise, interference, corrupted transmissions from the same RAT, etc.). If the observed radio energy is above a threshold, terminal device **16504** may determine that the channel is busy. As terminal device **16504** may only observe unattributed radio energy, terminal device **16504** may have to continue listening to the channel to determine when the channel is free, e.g., when the observed radio energy falls below the threshold.

In some aspects of physical carrier sensing, terminal device **16504** may perform preamble detection (e.g., for IEEE 802.11 preambles in an exemplary Wi-Fi setting), in which terminal device **16504** may process received channel data to determine if the channel contains any preambles transmitted by other transmitters of the same RAT. If terminal device **16504** detects a preamble, terminal device **16504** may determine that the channel is busy for the current frame (in contrast to ED, in which terminal device **16504** may need to continue listening to determine when the observed radio energy falls).

Communication nodes performing physical carrier sensing may therefore actively monitor and sample the channel to determine whether the channel is busy or not. As detailed above, in the preamble detection case a communication node such as terminal device **16504** may be able to determine that the channel is busy for the current frame if a preamble is detected (as the duration of the detected transmission may be deterministic). In the ED case, terminal device **16504** may continue monitoring the channel during the current frame if sufficient radio energy is observed (to determine when the radio energy falls below the threshold) as the duration of the detected transmission may not be deterministic. Physical carrier sensing may therefore only inform terminal device **16504** that the channel is busy for at most the current frame.

In virtual carrier sensing, communication nodes may be able to obtain more information about the duration of any detected transmissions. Specifically, communication nodes may in some cases use a transmission request-grant handshake procedure to reserve the channel for a duration of time, e.g., a reservation period. In these transmission request-grant handshake procedures (e.g., a Request to Send (RTS)/Clear to Send (CTS) sequence in an exemplary Wi-Fi setting), a potential transmitter such as terminal device **16504** may transmit a transmission request (e.g., an RTS) to a network access node, such as network access node **16510,** that contains a reservation period (e.g., a Network Allocation Vector (NAV) in an exemplary Wi-Fi setting) for which the potential transmitter wishes to reserve the channel to transmit a pending transmission. Network access node **16510,** may receive the transmission request and, assuming the channel reservation is permitted, transmit a transmission grant (e.g., a CTS) to terminal device **16504** that also contains an updated reservation period that also counts for the time elapsed since the transmission request. Terminal device **16504** may then transmit the pending transmission to network access node **16510,** which may respond with an acknowledgement (ACK) or non-acknowledgement (NACK) to signal whether the transmission was successfully received or not. In some aspects, terminal device **16504** and network access node **16510** may utilize an ACK/NACK scheme, while in other aspects terminal device **16504** and network access node **16510** may utilize an ACK-only scheme. In an ACK/NACK scheme, the receiving device may transmit either an ACK or a NACK depending on whether the transmission was successfully received. In an ACK-only scheme (e.g., as used in Wi-Fi), the receiving device may transmit an ACK if the transmission was successfully received and may not transmit anything if the transmission was not successfully received. The transmitting device may therefore set a timer upon transmitting the transmission and, if the timer expires and no ACK has been received, may re-transmit the transmission (in other words, may treat the non-response as an implicit NACK). Both can be implemented into these aspects.

Any other transmitters that are listening to the channel during the transmission request-grant handshake procedure (and are capable of decoding the handshake messages) may receive the transmission request and transmission grant. As the reservation period and updated reservation period specify how long the transmission request-grant handshake procedure (which may include the duration of the transmission request, transmission grant, the transmission, and ACK/NACK response) will last, the other transmitters may read the reservation period from the transmission request and/or transmission grant and determine that the channel will be busy for the duration of the reservation period/updated reservation period (which may end at the same time). In accordance with virtual carrier sensing, the other transmitters may set and initiate a reservation counter (e.g., a NAV) equal to the reservation period/updated reservation period and assume that the channel will be busy until at least the reservation counter has expired. As the reservation period/updated reservation period may be multiple frames in length, transmitters operating with virtual carrier sensing may be able to determine that the channel will be busy for longer periods of time (relative to the maximum single frame of physical carrier sensing). The transmitters may therefore 'virtually' determine that the channel will be busy for the extra frames of the reservation period/updated reservation period without actively checking the channel during these extra frames. Additionally, other transmitters can set a reservation counter (e.g., a NAV) by decoding other signal components. For example, another transmitter in an exemplary W-Fi- setting may be able to detect a Wi-Fi preamble and decode the Signal Field. The Signal Field may indicate the length of the packet (e.g., in IEEE 802.11n onwards), which the other transmitter may determine and use to set the NAV as part of virtual sensing. There may accordingly be various different mechanisms by which transmitters can determine the length of a given transmission as part of virtual carrier sensing and use this information to set a reservation counter.

The ability to sense transmissions by other transmitters may be a component of collision sensing networks. If a transmitter does not detect a transmission by another transmitter, the transmitter may cause a collision by transmitting at the same time as the other transmitter. The intended receiver may then have difficulty in receiving the transmissions as they may become corrupted by the collision. Excessive collisions may therefore degrade network performance.

Due to formatting differences, the use of both the first waveform format and the second waveform format for transmissions may cause coexistence-related collision issues between transmissions. For example, terminal device **16504** may have a pending uplink transmission that terminal device **16504** wants to transmit to network access node **16510** as in the second waveform format (such as a 20 MHz Wi-Fi signal in an exemplary Wi-Fi setting). In accordance with a contention-based multiple access scheme such as CSMA/CA, terminal device **16504** may first perform carrier sensing on the channel (shared between the communication nodes of radio communication network **16500)** to determine whether the channel is busy, e.g., whether another communication node is currently transmitting on the channel. As terminal device **16504** may be configured to transmit and receive according to the second waveform format, terminal device **16504** may perform the carrier sensing in the second waveform format. While energy detection may detect energy from any transmission, preamble detection and virtual carrier sensing (e.g., detection of transmission request-grant handshakes or decoding a packet length) may depend on the format of the transmissions. Accordingly, terminal device **16504** may be able to perform preamble detection and virtual carrier sensing to detect second format transmissions but, as first format transmissions are in a different waveform format, may not be able to detect first format transmissions with preamble detection or virtual carrier sensing.

Accordingly, if another communication node is transmitting with the same waveform format, e.g., if network access node **16510** is transmitting a second format transmission, terminal device **16504** may detect the second format transmission (via carrier sensing analysis performed at baseband modem **17106** on signals received via antenna system **17102** and RF transceiver **17104)** and consequently determine that the channel is busy. As terminal device **16504** may be configured to receive and decode second format transmissions, terminal device **16504** may be able to detect the second format transmission by network access node **16510** with preamble detection, such as by reading the preamble of the second format transmission. Additionally, if the second format transmission is a transmission request (e.g., RTS), transmission grant (e.g., CTS), or another packet with a decodable packet length (e.g., in the Signal Field), terminal device **16504** may be able to detect the second format transmission with virtual carrier sensing, such as by decoding the packet to read the reservation period (e.g., the NAV in the RTS or CTS) or packet length. Accordingly, as the second format transmission may be in a waveform format that is compatible with terminal device **16504,** terminal device **16504** may be able to detect the second format via preamble detection and/or virtual carrier sensing. As indicated above, terminal device **16504** may determine that the channel is busy for one or more frames based on the detected preamble and/or identified reservation period.

However, if a transmission of a different waveform format is occupying the channel when terminal device **16504** is performing carrier sensing, terminal device **16504** may run into difficulties in detecting the transmission (e.g., if terminal device **16504** is not configured for the different waveform format and/or is not performing carrier sensing according to the different waveform format). For example, if terminal device **16504** is not configured to receive and decode the first format transmissions, terminal device **16504** may not be able to decode a first format transmission. Accordingly, if network access node **16510,** terminal device **16502,** or assisting device **16902** is performing a first format transmission, terminal device **16504** may not be able to successfully detect the first format transmission with preamble detection or virtual carrier sensing. Additionally, if terminal device **16502** is performing a low-power transmission (e.g., in the first waveform format) when terminal device **16504** is performing carrier sensing, the low-power transmission may be too weak for terminal device **16504** to detect via energy detection. For example, terminal device **16502** may be transmitting with a low transmit power, e.g., 3 or 4 dBm, which may be significantly lower than a 'standard' transmit of e.g., 10-13 dBm. Accordingly, while terminal device **16504** may receive the low-power transmission from terminal device **16502,** the energy from the low-power transmission may be less than the detection threshold utilized by terminal device **16504** to determine that the channel is busy. Terminal device **16504** may therefore incorrectly determine that the channel is free and may begin a transmission, which may collide with the low-power transmission by terminal device **16502** and corrupt the low-power transmission.

Accordingly, the inability of coexisting devices (e.g., proximate devices that are configured to utilize a different waveform format) to detect first format transmissions may cause coexistence issues for terminal device **16502.** For example, in an exemplary Wi-Fi setting, network access node **16510** and terminal device **16504** may communicate using a wideband 20 MHz IEEE 802.11 Wi-Fi waveform, e.g., a second waveform format, while network access node **16510,** terminal device **16502,** and assisting device **16902** may communicate using a narrowband IEEE 802.11 Wi-Fi waveform, such as a 5 MHz signal, a 2 MHz signal, etc., e.g., a first waveform format. In an exemplary Bluetooth setting, the first waveform format and/or the second waveform format may be a Bluetooth waveform. Terminal device **16504** may therefore be a considered a coexisting device, and may not be able to read and decode the first format transmissions. Terminal device **16504** may also be considered a legacy device. If terminal device **16502** is performing a first format transmission to assisting device **16902** with a low transmit power, terminal device **16504** may not be able to successfully detect the first format transmission and may perform a colliding second format transmission to network access node **16510.** The colliding transmissions may corrupt the transmissions (or may in some cases only corrupt the first format transmission as the second format transmission may have much higher transmit power), which may impede the ability of assisting device **16902** and network access node **16510** to successfully receive the first format and second format transmissions, respectively.

In some aspects, collision-related coexistence issues may be addressed with channel reservation assistance and/or coexistence preamble encapsulation. For example, in the channel reservation assistance case, assisting device **16902** may compete for access to the channel with other communication nodes, such as terminal device **16502** and/or network access node **16510,** and reserve the channel (e.g., by sending transmission requests) for terminal device **16502** to perform first format transmissions. In the coexistence preamble encapsulation case, assisting device **16902** may encapsulate its first format transmissions (e.g., to network access node **16510** and/or terminal device **16502)** with a valid preamble for coexisting devices (e.g., a coexistence preamble) such as terminal device **16504,** which may enable terminal device **16504** to detect the coexistence preamble and consequently refrain from transmitting during the remainder of the frame that contains the first format transmission. Additionally, as some preambles (such as Wi-Fi 802.11n preambles in the Signal Field) may specify the length of the transmission, terminal device **16504** may also be able to utilize the detected coexistence preamble to perform virtual carrier sensing, e.g., by reading the transmission length from the detected coexistence preamble and setting the reservation counter accordingly. This use of virtual carrier sensing may enable terminal device **16502** to identify multiple frames that will be busy (as opposed to single frame for normal preamble detection). In some aspects, network access node **16510** may also perform coexisting preamble encapsulation.

Accordingly, in some aspects assisting device **16902** may perform channel reservation assistance for terminal device **16502.** In particular, assisting device **16902** may contend for access to the channel with other communication nodes, reserve the channel for terminal device **16502** via a transmission request (e.g., an RTS), notify terminal device **16502** of the channel reservation, receive an uplink transmission (e.g., in the first waveform format) from terminal device **16502,** and forward the uplink transmission to network access node **16510.** By reserving the channel for terminal device **16502** for a reservation period, assisting device **16902** may enable terminal device **16502** to transmit a first format uplink transmission to assisting device **16902** during the reservation period without risk of collision with a coexisting device.

FIG. **172** shows message sequence chart **17200** illustrating channel reservation assistance in accordance with some aspects. As shown in FIG. **172,** network access node **16510** may transmit one or more downlink transmissions to terminal device **16502** in **17202.** In some aspects, network access node **16510** may transmit the downlink transmissions to terminal device **16502** in **17202** in the first waveform format. In some aspects, network access node **16510** may transmit the downlink transmissions to terminal device **16502** in **17202** as first format transmissions that are encapsulated with a coexistence preamble, e.g., a preamble in the second waveform format. In some aspects, network access node **16510** may transmit the downlink transmissions to terminal device **16502** in **17202** as second format transmissions, for which terminal device **16502** may in some aspects be configured in the first waveform format and the second waveform format (e.g., one or more second waveform format antennas of antenna system **16602,** second waveform format RF components at RF transceiver **16604,** second waveform format functionality at baseband modem **16606,** one or more first waveform format antennas of antenna system **16602,** first waveform format RF components at RF transceiver **16604,** first waveform format functionality at baseband modem **16606).**

Assisting device **16902** (under the control of communication module **17006)** may then reserve the channel for terminal device **16502** in **17204.** In particular, assisting device 16902 may perform carrier sensing in **17204** (e.g., as part of a CSMA/CA scheme as detailed above), in which assisting device **16902** may monitor the channel for other transmissions before accessing the channel. In some aspects, assisting device **16902** may perform carrier sensing in the second waveform format to detect transmissions by coexisting devices. In some aspects, assisting device **16902** may perform carrier sensing in the first waveform format and the second waveform format to detect transmissions by coexisting devices and other first waveform format devices. Once the channel is free and assisting device **16902** is permitted to access the channel (e.g., after assisting device **16902** has completed any sensing periods and/or backoff procedures), assisting device **16902** may reserve the channel for a reservation period by transmitting a transmission request (e.g., an RTS) that specifies a reservation period (e.g., a NAV) for which assisting device **16902** wishes to reserve the channel. Network access node **16510** may then respond with a transmission grant (e.g., a CTS) that specifies an updated reservation period (e.g., a NAV, where the expiry of the reservation period and the updated reservation period coincide). Assisting device **16902** may therefore have reserved the channel for the reservation period.

Assisting device **16902** may transmit the transmission request as a second format transmission during the channel reservation of **17204.** As the transmission request is a second format transmission that is decodable by coexisting devices (e.g., communication nodes that are configured according to the second waveform format), coexisting devices such as terminal device **16504** may be able to detect and read the transmission request. For example, terminal device **16504** may decode the transmission request and read the reservation period specified in the transmission request (in addition to, potentially, the transmission grant and updated reservation period) as part of virtual carrier sensing. In accordance with virtual carrier sensing, terminal device **16504** may set a reservation counter (e.g., a NAV) that expires at the end of the reservation period/updated reservation period and assume that the channel will be busy until at least the reservation counter expires. Accordingly, coexisting devices may assume that the channel is busy, or ‘reserved’, until the end of the reservation period/updated reservation period. Assisting device **16902** may therefore reserve the channel for terminal device **16502** in **17204.**

As the channel may be reserved for the duration of the reservation period following **17204,** assisting device **16902** may notify terminal device **16502** of the channel reservation in **17206.** In some aspects, assisting device **16902** may notify terminal device **16502** of the channel reservation with a first format transmission. As the channel may remain reserved during at least **17206,** there may not be any colliding transmissions.

Assisting device **16902** may specify the reservation period to terminal device **16502** as part of the channel reservation notification in **17206.** Terminal device **16502** may then (under the control of baseband modem **16606)** determine how much data terminal device **16502** can transmit in accordance with the reservation period (during the reservation period) and/or transmission bitrate, e.g., a transmission size. In some aspects, terminal device **16502** may consider the amount of time for the transmission to assisting device **16902,** forwarding the transmission to network access node **16510** (including any processing at assisting device **16902),** and an ACK/NACK period (e.g., SIFS) following the forwarded transmission in determining the transmission size.

Terminal device **16502** may then retrieve pending uplink data intended for network access node **16510** (up to the transmission size) and transmit the uplink data as a first format uplink transmission to assisting device **16902** in **17208.** In some aspects, terminal device **16502** may utilize a lower transmission power than would be sufficient to transmit the uplink transmission to network access node **16510.** As the channel is reserved for the reservation period, there may not be any colliding transmissions. Assisting device **16902** may then receive the uplink transmission from terminal device **16502** and forward the uplink transmission to network access node **16510** in **17210.** In some aspects, assisting device **16902** may transmit an ACK/NACK to terminal device **16502** following reception of the uplink transmission in **17210.** In some aspects, assisting device **16902** may repeat the uplink transmission in **17210.** In some aspects, assisting device **16902** may decode and error-correct the uplink transmission, re-encode the uplink transmission, and transmit the re-encoded uplink transmission in **17210.** In some aspects, assisting device **16902** may forward the uplink transmission to network access node **16510** in **17210** as a second format transmission. In some aspects, assisting device **16902** may forward the uplink transmission to network access node **16510** in **17210** as a first format transmission. As the channel may continue to be reserved for the duration of the reservation period, there may not be any collisions.

Network access node **16510** may then receive the forwarded uplink transmission from assisting device **16902.** Network access node **16510** may then (under the control of communication module **16706)** decode the forwarded uplink transmission and check for errors. If there are no errors, network access node **16510** may transmit an ACK in **17212.** If there are errors, network access node **16510** may transmit a NACK in **17212** (e.g., in an ACK/NACK scheme) or may not transmit any ACK or NACK in **17212** (e.g., in an ACK-only scheme). In some aspects, network access node **16510** may transmit the ACK/NACK in **17212** as a first format transmission. In some aspects, network access node **16510** may identify that the forwarded uplink transmission originated at terminal device **16502** (e.g., via addressing information in the forwarded uplink transmission) and transmit the ACK/NACK in **17212** as a first format transmission in response to determining that the forwarded uplink transmission originated at terminal device **16502** (e.g., as network access node **16510** may identify that terminal device **16502** is configured for first format operation). In some aspects, network access node **16510** may transmit the ACK/NACK in **17212** as a second format transmission. In some aspects, assisting device **16902** may be configured to receive the second format ACK/NACK from network access node **16510,** generate a first format ACK/NACK, and transmit the first format ACK/NACK to terminal device **16502.**

The ACK/NACK transmission in **17212** may occur at the end the reservation period (e.g., an SIFS following a RTS/CTS exchange). Accordingly, assisting device **16902** may reserve the channel for terminal device **16502** via the channel reservation assistance procedure detailed in FIG. **172.** The channel reservation assistance procedure may enable terminal device **16502** to transmit uplink transmissions in the first waveform format to network access node **16510** via assisting device **16902** when the channel is reserved. As assisting device **16902** may perform the channel reservation (e.g., RTS/CTS exchange) with network access node **16510** with second format transmissions, e.g., a coexistence-compatible format, other coexisting devices such as terminal device **16504** may detect the channel reservation and consider the channel reserved for the duration of the reservation period (e.g., in accordance with virtual carrier sensing, such as by using a NAV). This may help prevent colliding transmissions and enable terminal device **16502** to utilize the first waveform format for transmissions.

In some aspects, assisting device **16902** and/or network access node **16510** may perform coexistence preamble encapsulation to address coexistence-related collision issues. For example, if network access node **16510** transmits the downlink transmission to terminal device **16502** in **17202** as a first format transmission, other coexisting devices such as terminal device **16504** may not be able to detect the first format transmission via preamble detection. Additionally, in some cases the energy seen at terminal device **16504** from the first format transmission may not exceed the energy detection threshold. Accordingly, in an exemplary scenario, terminal device **16504** may then mistakenly determine that the channel is free (by performing carrier sensing) and may begin a transmission. The transmission by terminal device **16504** may collide with the first format transmission by network access node **16510** in **17202** and may corrupt the transmissions.

In some aspects, network access node **16510** may therefore encapsulate the first format transmission to terminal device **16502** with a coexistence preamble, e.g., a first waveform format preamble that terminal device **16504** can decode and read. Accordingly, terminal device **16504** may detect the coexistence preamble encapsulating the first format transmission from network access node **16510** to terminal device **16502** in **17202** during carrier sensing. Terminal device **16504** may then correctly determine that the channel is busy and refrain from transmitting until the channel is free (including any sensing windows and/or backoff procedures and reservation counters if applicable). Network access node **16510** may therefore protect first format transmissions to terminal device **16502** from collisions with coexistence preamble encapsulation. In some aspects, as coexisting devices configured to perform carrier sensing according to the second waveform format may be able to detect the coexistence preamble, the coexistence preamble may be resistant to collisions by coexisting devices configured according to the second waveform format.

In some aspects, assisting device **16902** may also encapsulate first format transmissions with coexistence preambles. FIG. 173 shows message sequence chart **17300** illustrating an example of coexistence preamble encapsulation in accordance with some aspects. Network access node **16510,** assisting device **16902,** and terminal device **16502** may perform **17302-17308** in the manner detailed above for **17202-17208,** respectively. Accordingly, assisting device **16902** may contend for the channel and reserve the channel for terminal device **16502** for a reservation period.

Terminal device **16502** may then transmit the initial uplink transmission in **17308** in the first waveform format, which may be protected from collisions due to the channel reservation. Assisting device **16902** may then receive the uplink transmission. In some aspects, assisting device **16902** may transmit an ACK/NACK to terminal device **16502** following reception of the uplink transmission.

In the setting of message sequence chart **17300,** the reservation period may have sufficient duration to include the channel reservation notification of **17306** and the initial uplink transmission in **17308** (in addition to any ACK/NACK from assisting device **16902).** Accordingly, in some aspects assisting device **16902** may only reserve the channel (e.g., via a NAV specified in an RTS) with network access node **16510** for a duration of time intended to include the initial channel reservation notification and the initial uplink transmission. In some aspects, assisting device **16902** may reserve the channel for a shorter reservation period. In some aspects, the initial uplink transmission by terminal device **16502** may occupy a longer duration within the reservation period (and leave less remaining time for a forwarding transmission by assisting device **16902** within the reservation period).

Accordingly, in contrast to message sequence chart **17200** of FIG. **172,** the reservation period of the channel reservation negotiated by assisting device **16902** in **17304** may be sufficient to include the channel reservation notification in **17306** and initial uplink transmission in **17306** but not the forwarding transmission (and any following ACK/NACK). Assisting device **16902** may therefore forward the uplink transmission to network access node **16510** after the channel reservation has expired, e.g., after the reservation period is over. To help protect the forwarded uplink transmission (which may be a first format uplink transmission) from collisions by coexisting devices, assisting device **16902** (under the control of communication module **17006)** may encapsulate the first format uplink transmission with a coexistence preamble in **17310.** Assisting device **16902** may then perform carrier sensing in **17312** to determine when the channel is free. After determining that the channel is free in **17312,** assisting device **16902** may forward the first format uplink transmission with the coexistence preamble (which in some aspects may include transmitting the coexistence preamble followed by the first format uplink transmission) in **17314.** As assisting device **16902** has determined that the channel is free in **17312** and transmitted the first format uplink transmission with a coexistence preamble, the forwarded uplink transmission may be protected from collisions (as coexisting devices such as terminal device **16504** may detect the coexistence preamble and determine that the channel is busy). Network access node **16510** may receive the forwarded uplink transmission in **17314** and transmit an ACK/NACK in **17316** (or an ACK or no ACK in an ACK-only scheme). In some aspects, network access node **16510** may transmit the ACK/NACK in **17316** to assisting device **16902** as a first format transmission. In some aspects, assisting device **16902** may forward the ACK/NACK to terminal device **16502.** In some aspects, assisting device **16902** may forward the ACK/NACK to terminal device **16502** as a first format transmission encapsulated with a coexistence preamble. In some aspects, network access node **16510** may transmit the ACK/NACK to assisting device **16902** as a first format transmission. As network access node **16510** may transmit the first format ACK/NACK to terminal device **16502** during an ACK/NACK period (e.g., an SIFS) following the forwarded uplink transmission by assisting device **16902** in **17314,** the first format ACK/NACK may be protected from collisions.

In some aspects, instead of adding a coexistence preamble and performing carrier sensing in **17310-17312,** assisting device **16902** may reserve the channel again with network access node **16510** (e.g., with an RTS/CTS exchange) and forward the first format uplink transmission to network access node **16510** as a second format transmission. (e.g., without a coexistence preamble). As the channel is reserved, the forwarded uplink transmission may be protected from collisions.

Coexistence preamble encapsulation and channel reservation assistance may therefore help protect first format transmissions from collisions from coexisting devices. In some aspects, network access node **16510,** assisting device **16902,** and terminal device **16502** may perform only one of coexistence preamble encapsulation and channel reservation assistance. In some aspects, network access node **16510,** assisting device **16902,** and terminal device **16502** may perform both of coexistence preamble encapsulation and channel reservation assistance.

In some aspects, terminal device **16502** may request channel reservation assistance from assisting device **16902,** in response to which assisting device **16902** may reserve the channel for terminal device **16502** to perform a transmission. For example, terminal device **16502** may have pending uplink data that terminal device **16502** aims to transmit to assisting device **16902** or network access node **16510** (e.g., via assisting device **16902).** Accordingly, before **17204** or **17304,** terminal device **16502** may perform carrier sensing (in accordance with the first waveform format) to determine if the channel is free. In some aspects, the first waveform format may have a narrower bandwidth than the second waveform format, which may include the first waveform format having a narrowband bandwidth and the second waveform format having a wideband bandwidth. Accordingly, terminal device **16502** may perform the carrier sensing on a narrowband channel. As the narrowband channel may be located within a wideband channel for the second waveform format, terminal device **16502** may be able to detect second format transmissions by coexisting devices (e.g., by energy detection) in addition to first format transmissions (by other first format devices that fall on the same narrowband channel). If terminal device **16502** determines that the channel is free, terminal device **16502** may transmit a first format transmission to assisting device **16902** that contains a channel reservation assistance request for assisting device **16902.** While terminal device **16502** may be able to determine that the channel is free before starting the first format transmission, as previously detailed coexisting devices may not be able to detect first format transmissions via carrier sensing. Accordingly, there may be a risk that the first format transmission from terminal device **16502** containing the channel reservation assistance request may be corrupted by a colliding second format transmission from a coexisting device (e.g., that failed to detect the first format transmission), e.g., terminal device **16504.**

If assisting device **16902** successfully receives the channel reservation assistance request from terminal device **16502** (e.g., if no colliding transmissions occurred that irreversibly corrupted the first format transmission), assisting device **16902** may transmit an ACK to terminal device **16502** in response (e.g., with a first format transmission) and proceed to perform **17204-17212** or **17304-17316** to reserve the channel for terminal device **16502.** Terminal device **16502,** assisting device **16902,** and network access node **16510** may then perform **17202-17212** to enable terminal device **16502** to transmit a first format uplink transmission to network access node **16510** via assisting device **16902.** If assisting device **16902** does not successfully receive the channel reservation assistance request, assisting device **16902** may transmit a NACK (e.g., if assisting device **16902** detected the first format transmission but did not successfully decode it) or may not transmit a response (e.g., if a colliding transmission occurred that irreversibly corrupted the first format transmission and assisting device **16902** did not detect any of the first format transmission). If terminal device **16502** receives a NACK or no response, terminal device **16502** may perform carrier sensing again to determine when the channel is free and attempt to transmit a channel reservation assistance request in another first format transmission. While collisions may occur due to the inability of coexisting devices to detect the first format transmissions, terminal device **16502** may continue to re-attempt the first format transmission until receiving an ACK in response from assisting device **16902,** which may be followed by **17204-17212** or **17304-17316.**

In some aspects, terminal device **16502** may perform uplink first format transmissions to network access node **16510** via assisting device **16902** by transmitting a transmission request (e.g., an RTS) with a first format transmission to assisting device **16902.** For example, terminal device **16502** may identify pending uplink data for network access node **16510** and determine a reservation period that can fit an uplink transmission including the pending uplink data. Terminal device **16502** may then generate a transmission request that specifies the reservation period (e.g., as a NAV) and transmit the transmission request to assisting device **16902** as a first format transmission. As noted above, terminal device **16502** may attempt to transmit the transmission request without collision protection, e.g., by performing carrier sensing to determine when the channel is free and transmitting the transmission request to assisting device **16902** as a first format transmission. As the first format transmission may in some cases not be detectable by coexisting devices such as terminal device **16504,** there may be a risk of collision. If assisting device **16902** successfully receives the transmission request, assisting device **16902** may then transmit a transmission grant (e.g., a CTS) to terminal device **16502** as a first format transmission. In some aspects, assisting device **16902** may encapsulate the first format transmission grant with a coexistence preamble, which may protect the first format transmission grant from collisions. In some aspects, assisting device **16902** may also transmit a coexistence transmission grant, e.g., a first format transmission grant, which may contain a coexistence-compatible reservation period e.g., a NAV, where a reservation period is specified in the second waveform format. Accordingly, coexisting devices such as terminal device **16504** may be able to read the reservation period and set a reservation counter that will reserve the channel for the duration of the reservation period.

Terminal device **16502** may then receive the first format transmission grant from assisting device **16902** in response to the transmission request, which may indicate that the channel is reserved. Terminal device **16502** may then transmit the pending uplink data to assisting device **16902** as a first format transmission in accordance with the reservation period (e.g., during the reservation period). In some aspects, assisting device **16902** may then forward the first format transmission during the reservation period. In some aspects, assisting device **16902** may reserve the channel again with network access node **16510** via a transmission request-grant handshake procedure (after the initial reservation period expires) and transmit the first format transmission to network access node **16510** in accordance with the transmission request-grant handshake procedure. In some aspects, assisting device **16902** may encapsulate the first format transmission with a coexistence preamble, contend for the channel after the reservation period is over, and transmit the first format transmission with the encapsulated coexistence preamble. In some aspects, terminal device **16502** may also utilize the transmission request-grant handshake procedure with assisting device **16902** to transmit data to assisting device **16902,** e.g., data that is intended for assisting device **16902** and not intended for network access node **16510.**

In some aspects, assisting device **16902** and terminal device **16502** may communicate locally with each other (in addition to the forwarding capacity to network access node **16510** detailed above). In order to protect first format transmissions from assisting device **16902** to terminal device **16502,** assisting device **16902** may encapsulate the first format transmissions with a coexistence preamble. In some aspects, assisting device **16902** may perform first waveform format and/or second waveform format carrier sensing to determine when the channel is free before transmitting to terminal device **16502.** In some aspects where the first waveform format is a narrowband waveform format, assisting device **16902** may perform first waveform format carrier sensing by performing carrier sensing on a narrowband channel.

As previously indicated, in some aspects network access node **16510** and/or assisting device **16902** may protect first format transmissions to terminal device **16502** with coexistence preamble encapsulation. To help protect first format transmissions from terminal device **16502,** in some aspects terminal device **16502** may utilize certain allocated first format transmission periods to perform first format transmissions. For example, network access node **16510** and/or assisting device **16902** may be configured to periodically (e.g., with a fixed period or schedule) reserve the channel for first format transmissions. In some aspects, network access node **16510** and/or assisting device **16902** may be configured to reserve the first format transmission periods by periodically transmitting transmission requests and/or transmission grants that specify a reservation period. Coexisting devices may then detect the transmission requests and/or grants and determine that the channel will be busy for the reservation period.

In some aspects, terminal device **16502** may have knowledge of the fixed period or schedule and therefore may be able to identify the reserved first format transmission periods ahead of time. In some aspects, terminal device **16502** may listen for transmission requests and/or grants from network access node **16510** or assisting device **16902** that are related to reserved first format transmission periods and, upon identifying a reserved first format transmission period, transmit first format transmissions during the reserved first format transmission period. As the channel is reserved, the first format transmissions may be protected. In some aspects, terminal device **16502** may have pending uplink data for network access node **16510** or assisting device **16902** and decide whether to wait for a scheduled reserved first format transmission period or to attempt to transmit the pending uplink data before the scheduled reserved first format transmission period without collision protection. For example, if the pending uplink data is low-priority, terminal device **16502** may decide to attempt to transmit the pending uplink data without collisions protection, e.g., not within a reserved first format transmission period. If the pending uplink data is high-priority, terminal device **16502** may decide to wait until a scheduled reserved first format transmission period to transmit the pending uplink data. In some aspects, terminal device **16502** may utilize a reserved first format transmission period to request channel reservation assistance from assisting device **16902** or to transmit a transmission request to assisting device **16902.** Terminal device **16502** may then transmit the pending uplink data in the resulting reservation period (where terminal device **16502** may be able to specify the reservation period) instead of in the reserved first format transmission period.

In some aspects, terminal device **16502** may enter a sleep or low-power state in between reserved first format transmission periods. For example, terminal device **16502** may identify when reserved first format transmission periods are scheduled, enter a sleep or low-power state in between the scheduled reserved first format transmission periods, and wake up for the scheduled reserved first format transmission periods. This may enable terminal device **16502** to conserve power.

In some aspects, terminal device **16502** may contend for access to the channel during a reserved first format transmission period. For example, there may be other communication nodes attempting to perform first format transmissions that may also identify the reserved first format transmission period. The contending communication nodes including terminal device **16502** may perform carrier sensing to determine when the channel is free and then access the channel according to the contention rules (including, e.g., sensing windows and/or backoff procedures).

In some aspects, a distributed-coordinated channel access scheme (e.g., DCF) can be utilized, such as where the communication nodes contend for access to the channel on a largely equitable basis. In some aspects, the communication nodes of radio communication network **16500** can utilize a point-coordinated channel access scheme (e.g., PCF). For example, network access node **16510** may act as the point coordinator and may have priority access to the channel. In some aspects, such as Wi-Fi use scenarios, network access node **16510** may utilize a shorter sensing period (e.g., PCF Interframe Space (PIFS)) following a transmission than the other communication nodes (which may use e.g., DIFS, where PIFS<DIFS).

As network access node **16510** may be able to occupy the channel before the other communication nodes, network access node **16510** may have control over the channel. Instead of competing for access to the channel (e.g., with contention protocols governed by carrier sensing), the other communication nodes may wait until receiving permission from network access node **16510** before accessing the channel. For example, network access node **16510** may send a polling frame (e.g., Contention Free Poll (CF-Poll)) frame to a given communication node that grants the communication node permission to access the channel. Network access node **16510** may cycle between the communication nodes and sequentially grant access to the channel to each communication node. If a communication node has pending data to transmit, the communication node may perform a transmission on the channel after receiving a polling frame from network access node **16510.** If the communication node does not have pending data to transmit and receives a polling frame from network access node **16510,** the communication node may transmit a null frame, e.g., a null transmission without any data. In some aspects of point-coordinated channel access schemes, the channel may be divided in time between contention periods (CPs) during which all communication nodes (including network access node **16510)** may utilize a distributed-coordinated channel access scheme and contention-free periods (CFPs) during which a point coordinator such as network access node **16510** may control access to the channel with a point-coordinated channel access scheme.

In some aspects, radio communication network **16500** may also utilize a point-coordinated channel access scheme to control access to the channel. Accordingly, network access node **16510** may cycle through the communication nodes (assisting device **16902,** terminal device **16504,** terminal device **16504,** and any other communication nodes) and sequentially grant access to the communication nodes with polling frames. Terminal device **16504** may respond (as conventionally) by performing a data transmission or null transmission upon receiving a polling frame from network access node **16510.**

Network access node **16510** may also transmit polling frames to terminal device **16502** to grant terminal device **16502** access to the channel. FIG. **174** shows message sequence chart **17400** illustrating an example in accordance with some aspects. As shown in FIG. **174,** network access node **16510** may transmit a polling frame to terminal device **16502** in **17402.** In some aspects, network access node **16510** may transmit the polling frame in **17402** as a first format transmission, e.g., a first format polling frame. In some aspects, network access node **16510** may encapsulate the first format polling frame to terminal device **16502** with a coexistence preamble. In some aspects, network access node **16510** may not encapsulate the first format polling frame to terminal device **16502** with a coexistence preamble (as there may not be a risk of collision due to communication nodes needing to receive a polling frame from network access node **16510** before accessing the channel).

After receiving the polling frame from network access node **16510,** terminal device **16502** may then transmit pending uplink data to assisting device **16902** as a first format transmission in **17404.** In some aspects, terminal device **16502** may use a lower transmission power than would be sufficient to reach network access node **16510.**

Assisting device **16902** may then receive the first format transmission from terminal device **16502.** Assisting device **16902** may then forward the first format transmission to network access node **16510** in **17406.** To uphold the point-coordinated channel access scheme, assisting device **16902** may forward the first format transmission in a short amount of time (e.g., in the duration allowed for transmissions following a polling frame). In some aspects, assisting device **16902** may forward the first format transmission to network access node **16510** as a first format transmission. In some aspects, assisting device **16902** may process the first format transmission to make the first format transmission appear as if it was transmitted directly to network access node **16510** from terminal device **16502,** such as by removing any addressing or forwarding information that relates to assisting device **16902** and/or re-addressing the first format transmission to be from terminal device **16502** to network access node **16502.** In some aspects, assisting device **16902** may convert the first format transmission to a second format transmission and transmit the second format transmission in **17406.**

As the polling frame was for terminal device **16502,** network access node **16510** may then transmit an ACK/NACK to terminal device **16502** in **17408,** e.g., as a first format transmission. In some aspects, such as if the forwarded first format transmission appears to be directly from terminal device **16502,** network access node **16510** may assume that the forwarded first format transmission was transmitted directly to network access node **16510** by terminal device **16502** (e.g., without assisting device **16902).**

FIG. **175** shows message sequence chart **17500** as an alternate example to message sequence chart **17400** in accordance with some aspects. As shown in FIG. **175,** network access node **16510** may transmit a first format polling frame to terminal device **16502** in **17502.** Terminal device **16502** may then transmit a first format transmission to assisting device **16902** in **17504.** Instead of forwarding the first format transmission quickly (e.g., as in the case of **17406),** assisting device **16902** may hold (e.g., buffer) the first format transmission and wait for network access node **16510** to transmit a polling frame to assisting device **16902** in **17506.** In some aspects, network access node **16510** may transmit polling frames to other communication nodes, such as terminal device **16504,** during **17506.**

Network access node **16510** may then transmit a polling frame to assisting device **16902** in **17508.** In some aspects, network access node **16510** may transmit the polling frame in **17508** as a first format transmission. In some aspects, network access node **16510** may transmit the polling frame in **17508** as a second format transmission. After receiving the polling frame from network access node **16510** in **17508,** assisting device **16902** may forward the first format transmission (received from terminal device **16502)** to network access node **16510** in **17510.** In some aspects, assisting device **16902** may forward the first format transmission in **17510** as a first format transmission. In some aspects, assisting device **16902** may forward the first format transmission in **17510** as a second format transmission.

Network access node **16510** may receive the forwarded transmission and transmit an ACK/NACK to assisting device **16902** in **17512** (as either a second format or first format transmission). In some aspects, assisting device **16902** may forward the ACK/NACK to terminal device **16502,** e.g., as a first format transmission. Alternatively, in some aspects network access node **16510** may utilize an ACK-only scheme in **17512.**

FIG. **176** shows message sequence chart **17600** illustrating another example using a port-coordinated channel access scheme in accordance with some aspects. As shown in FIG. **176,** network access node **16510** may transmit a polling frame (second format or first format) to assisting device **16902** in **17602.** Assisting device **16902** may therefore determine that it has access to the channel over the following frame, e.g., that the channel is reserved for assisting device **16902.** Assisting device **16902** may then notify terminal device **16502** of the channel reservation in **17604** (with a first format transmission). Terminal device **16502** may then transmit a first format transmission to assisting device **16902** in **17606.** Assisting device **16902** may then forward the first format transmission (as a first format transmission or after converting to the second waveform format) to network access node **16510** in **17608.** As the polling frame may only have been originally intended to grant access to assisting device **16902** to perform a transmission, in some aspects assisting device **16902** and terminal device **16502** may need to perform **17604-17608** in a short duration of time. Network access node **16510** may then transmit an ACK/NACK to assisting device **16902** in **17610** (in the second waveform format or the first waveform format). In some aspects, assisting device **16902** may then forward the ACK/NACK to terminal device **16502.**

Additionally, in some aspects assisting device **16902** may also function in a point coordinator role. Accordingly, assisting device **16902** may have point coordinator credentials any may be configured to transmit polling frames to coordinate transmissions by terminal devices connected to assisting device **16902,** including terminal device **16502.** Accordingly, assisting device **16902** may be configured to seize the channel according to the shorter sensing period for point coordinators (e.g., PIFS) by sending polling frames. In order to ensure that the polling frames are detected by coexisting devices, assisting device **16902** may transmit both first format and second format polling frames. The first format polling frame may identify the terminal device that assisting device **16902** is permitting to use the channel while the format polling frame may be detectable by coexisting devices and used to ensure that coexisting devices such as terminal device **16504** detect the polling frame and refrain from transmitting. Accordingly, assisting device **16902** may utilize point coordinator functionality to reserve the channel for first format devices such as terminal device **16502.** In some aspects, assisting device **16902** may only provide point coordinator functionality locally, e.g., for terminal devices connected to assisting device **16902,** while network access node **16510** may retain primary point coordinator responsibilities.

The operation of the communication nodes of radio communication network **16500** in a point-coordinated channel access scheme may protect first format transmissions from coexisting devices due to the operation of network access node **16510** as the point coordinator. In some aspects where radio communication network **16500** has both contention periods and contention-free periods, network access node **16510,** assisting device **16902,** and terminal device **16502** may operate in any manner detailed above regarding distributed-coordination channel access schemes during the contention periods and in any manner detailed above regarding point-coordinated channel access schemes during the contention-free periods.

Various mechanisms may be provided to protect first format transmissions from coexisting devices. For example, in some aspects, an assisting device (e.g., assisting device **16902)** may perform channel reservation assistance to reserve the channel for devices configured for first format operation (e.g., terminal device **16502),** which may provide protection to the first format devices from collisions caused by coexisting devices. In some aspects, assisting devices and/or network access nodes (e.g., network access node **16510)** may encapsulate first format transmissions with coexistence preambles, which may enable coexisting devices to detect the first format transmissions and refrain from accessing the channel. Additionally, due to the use of assisting devices as forwarding links and/or the use of first format transmissions, terminal devices may be enabled to reduce power consumption.

In some aspects, terminal device **16502** may be located closer (e.g., due to mobility) to network access node **16510** than assisting device **16902.** Terminal device **16502** may therefore perform first format transmissions directly to network access node **16510.** In some aspects, assisting device **16902** may perform channel reservation assistance for terminal device **16502** (e.g., without forwarding) to protect the first format transmissions from terminal device **16502.**

The first format transmissions used by terminal device **16502,** network access node **16510,** and/or assisting device **16902** may be more power efficient than the second format transmission, in particularly at terminal device **16502.** In some aspects, the first waveform format may be a single-carrier waveform while in some aspects the second waveform format may be a multi-carrier waveform. In some aspects, the first waveform format may have a low peak-to-average-power ratio (PAPR), which may in some aspects be lower than the PAPR of the second waveform format. In some aspects, the first waveform format may be modulated with binary phase-shift keying (BPSK), quadrature phase-shift keying (QPSK), or Gaussian minimum-shift keying (GMSK). In some aspects, the first waveform format may use a spread-spectrum waveform. In some aspects, the data rate of the first format transmissions (e.g., for spread-spectrum waveforms) may be in the kilobit range, which may provide high spreading gain (e.g., 10-30 dB for a 1 MHz bandwidth). Terminal device **16502,** network access node **16510,** and/or assisting device **16902** may therefore be configured (at the antenna, radio, and baseband/communication levels) to transmit and receive the first format transmissions.

In an exemplary Wi-Fi setting, the second waveform format may be a wideband Wi-Fi waveform, such as an IEEE 802.11 20 MHz waveform. In some aspects, the first waveform format may be a narrowband Wi-Fi waveform, such as a 5 MHz, 2 MHz, 1 MHz IEEE 802.11 waveform. It will be appreciated that the terms "wideband" and "narrowband" used herein can apply to the sizes of the bands in comparison to each other and are not limited to the exemplary noted frequencies. In some aspects, the first waveform format may be an IEEE 802.11ax OFDMA sub-allocation of 26-tone or 52-tone Resource Units (RUs). Accordingly, network access node **16510** and terminal device **16504** may communicate with wideband Wi-Fi signals on a wideband channel (e.g., 20 MHz) while network access node **16510,** terminal device **16502,** and assisting device **16902** may communicate with narrowband Wi-Fi signals on a narrowband channel (e.g., 5 MHz, 2 MHz, 1 MHz, etc.) that overlaps with the wideband channel. In some aspects, collision between the wideband and narrowband Wi-Fi signals may be alleviated while enabling power savings at terminal device **16502.** In some aspects, the second waveform format and/or the first waveform format may be waveform formats of another radio access technology, such as another short-range or cellular radio access technology, such as LTE or LTE NB loT deployments in unlicensed spectrum.

In some aspects, assisting device **16902** may be configured to assist multiple terminal devices. As shown in FIG. **177,** in an exemplary scenario, terminal devices **16502, 16506,** and **16508** may be served by assisting device **16902** (where the number of terminal devices is scalable to any number). In some aspects, assisting device **16902** may operate in a heterogeneous network with network access node **16510,** where the coverage area of network access node **16510** may be significantly larger than the coverage area of assisting device **16902.** Assisting device **16902** may then serve terminal devices located in its local coverage area, such as terminal devices **16502, 16506,** and **16508.**

In some aspects, assisting device **16902** may therefore separately perform channel reservation assistance (e.g., in the manner of message sequence chart **17200** or **17300)** for each of terminal devices **16502, 16506,** and **16508.** Assisting device **16902** may perform a channel reservation procedure (e.g., RTS/CTS exchange) for terminal device **16502** to protect transmissions from terminal device **16502.** Afterward, assisting device **16902** may perform a channel reservation procedure for terminal device **16506.** Afterward, assisting device **16902** may perform a channel reservation procedure for terminal device **16508.** In the case of message sequence chart **17200,** each channel reservation procedure may involve two channel reservations: a first channel reservation for the initial uplink transmission from the terminal device to assisting device **16902,** and a second channel reservation for the forwarding uplink transmission from assisting device **16902.**

In some aspects, assisting device **16902** may perform a common channel reservation that enables each of terminal devices **16502, 16506,** and **16508** to access the channel simultaneously. For example, as previously indicated, in some aspects the first waveform format may use a narrowband waveform while the second waveform format may use a wideband waveform. The first waveform format may therefore use a narrowband channel while the second waveform format may use a wideband channel, where the narrowband channel may overlap or fall within the wideband channel. As terminal devices **16502, 16506,** and **16508** may be configured for narrowband first format operation, multiple of terminal devices **16502, 16506,** and **16508** may be able to access the wideband channel concurrently at narrowband 'subchannels' of the wideband channel. For example, if the wideband channel is e.g., 20 MHz and the narrowband channel is e.g., 2 MHz, up to ten terminal devices may each utilize a separate 2 MHz narrowband 'subchannel' of the 10 MHz wideband channel to transmit and receive narrowband first format signals.

Accordingly, in some aspects, assisting device **16902** may reserve the wideband channel and allocate multiple terminal devices to each utilize a different narrowband subchannel for narrowband first format transmission. For example, assisting device **16902** may reserve the wideband channel with network access node **16510** (e.g., as in **17202** or **17204,** e.g., with an RTS/CTS exchange that specifies a NAV). Assisting device 16902 may then notify terminal devices **16502, 16506,** and **16508** of the channel reservation (e.g., as in **17206** or **17306).** In some aspects, assisting device **16902** may specify a narrowband subchannel allocation in the channel reservation notifications, where the narrowband subchannel allocations may specify a different frequency subband, or narrowband subchannel, of the wideband channel that each of terminal devices **16502, 16506,** and **16508** are assigned. As terminal devices **16502, 16506,** and **16508** are assigned different narrowband subchannels, terminal devices **16502, 16506,** and **16508** may transmit concurrently (e.g., with narrowband first format transmissions each using a different narrowband subchannel) without interfering with each other.

Accordingly, after receiving the channel reservation notifications and subchannel allocations, terminal devices **16502, 16506,** and **16508** may each perform a narrowband first format uplink transmission to assisting device **16902** (during the reservation period) on the respectively assigned narrowband subchannel allocation. In some aspects (e.g., where the reservation period has sufficient duration to include both an initial uplink transmission and forwarded uplink transmission), assisting device **16902** may then forward the narrowband first format uplink transmissions to network access node **16510** (e.g., as in **17210-17212).**

In some aspects, assisting device **16902** may forward the narrowband first format uplink transmissions using the first format, such as by forwarding each respective narrowband first format uplink transmission on the corresponding narrowband subchannel allocation. In some aspects, (e.g., where the reservation period does not have sufficient duration to include both an initial uplink transmission and forwarded uplink transmission), assisting device **16902** may encapsulate the narrowband first format uplink transmissions with a coexistence preamble, hold (e.g., buffer) the narrowband first format uplink transmissions, and perform carrier sensing (e.g., as in **17310-17312)** to gain access to the channel via contention. After gaining access to the channel, assisting device **16902** may then transmit the narrowband first format uplink transmissions encapsulated by the coexistence preamble (e.g., as in **17314-17316).** In some aspects, assisting device **16902** may reserve the channel again (e.g., with an RTS/CTS exchange) and forward the narrowband first format uplink transmissions (e.g., without coexistence preamble encapsulation) to network access node **16510** during the reservation period.

Assisting device **16902** may therefore perform a common channel reservation to enable multiple terminal devices to perform protected first format transmissions concurrently. This may reduce the number of channel reservation assistance procedures that assisting device **16902** performs (compared to performing separate channel reservation assistance procedures), and may improve network efficiency.

In an exemplary Wi-Fi scenario, terminal devices **16502, 16506,** and **16508** may transmit the concurrent narrowband first format transmissions to assisting device **16902** using an OFDMA scheme, such as by using narrowband subchannel allocations that have the minimum Resource Unit (RU) size in IEEE 802.1 1 ax OFDMA mode. Assisting device **16902** may therefore assign the narrowband subchannel allocations based on RUs in IEEE 802.11ax OFDMA. In some aspects, assisting device **16902** may assign the narrowband subchannel allocations based on FDMA (as opposed to OFDMA). This may loosen the transmit timing, frequency, and power control requirements compared to OFDMA, which may reduce the cost of terminal devices **16502, 16506,** and **16508.** However, OFDMA may in some aspects enable a smaller RU size, e.g., a smaller narrowband subchannel allocation size. Furthermore, in some aspects the narrowband subchannel allocations may be different sizes, where e.g., terminal device **16502** is allocated a larger narrowband subchannel (by bandwidth) than terminal device **16506,** and may consequently be able to transmit with a higher data rate (potentially at the cost of higher power consumption). Assisting device **16902** may also be configured with more complex receiver components (e.g., at antenna system **17006** and radio module **17004)** to support common channel reservation due to the narrowband subchannel allocations and/or FDMA/OFDMA/MIMO schemes. In some aspects, assisting device **16902** may support Bluetooth, Zigbee, and/or different flavors of LTE, which may operate in the same unlicensed band.

In some aspects, assisting device **16902** may utilize 'trigger frames' to schedule transmissions for terminal devices **16502, 16506,** and **16508.** Accordingly, assisting device **16902** may utilize trigger frames (e.g., Wi-Fi trigger frames) to schedule concurrent transmissions by terminal devices **16502, 16506,** and **16508** on specific time-frequency radio resources, e.g., specific FDMA or OFDMA subcarriers. These trigger frames may convey uplink scheduling, modulation and other uplink transmission parameters. In addition, scheduled devices may use the information in trigger frames to synchronize their frequency and timing to the network access node **16510** and/or assisting device **16902** prior to performing an uplink transmission

In some aspects, assisting device **16902** may also perform relaying in the downlink direction on transmissions from network access node **16510** to terminal device **16502.** For example, in some aspects, network access node **16510** may transmit second format downlink transmissions intended for terminal device **16502** (e.g., with addressing information specifying terminal device **16502)** to assisting device **16902.** Assisting device **16902** may receive and forward the second format downlink transmissions to terminal device **16502.** In some aspects, assisting device **16902** may receive the second format downlink transmission from network access node **16510,** contend for the channel (e.g., with carrier sensing and/or channel reservations), and forward the second format downlink transmission to terminal device **16502** after gaining access to the channel. In some aspects, assisting device **16902** may forward the second format downlink transmission to terminal device **16502** by converting the second format downlink transmission to a first format downlink transmission and transmitting the first format downlink transmission to terminal device **16502.** In some aspects, assisting device **16902** may reserve the channel (e.g., via an RTS/CTS exchange with network access node **16510)** and transmit the first format downlink transmission during the reservation period. In some aspects, assisting device **16902** may encapsulate the first format downlink transmission with a coexistence preamble and transmit the first format downlink transmission to terminal device **16502** with the encapsulating header.

Accordingly, in some aspects, network access node **16510** may be configured only for second format operation. Assisting device **16902** may then perform second waveform format-to-first waveform format conversion to forward downlink transmissions from network access node **16510** to terminal device **16502** and first waveform format-to-second waveform format conversion to forward uplink transmissions from terminal device **16502** to network access node **16510.** Assisting device **16902** may also handle coexistence issues such as with channel reservation assistance and/or coexistence preamble encapsulation.

In some aspects, network access node **16510** may be configured only for first format operation. Accordingly, network access node **16510** and terminal device **16502** may communicate using the first waveform format. Assisting device **16902** may then forward uplink transmissions from terminal device **16502** to network access node **16510** in the first waveform format. In some aspects, assisting device **16902** may perform channel reservation assistance and/or coexistence preamble encapsulation for network access nodes **16510** and/or terminal device **16502.**

FIG. **178** shows an exemplary deployment of some aspects in a Wi-Fi IoT setting. As shown in FIG. 178, network access node **16510** may serve a group of communication nodes including terminal devices **16502, 16504, 16506,** and **16508,** and assisting device **16902** (in addition to various other communication nodes, if applicable). As shown in FIG. **178,** network access node **16510** may be configured as an access point, terminal device **16502** may be configured as a smoke detector, terminal device **16504** may be configured as a front door camera, terminal device **16506** may be configured as light bulb, terminal device **16508** may be configured as a weight scale, and assisting device **16902** may be configured as an electrical plug. These IoT devices are exemplary and the communication nodes of radio communication network **16500** may be configured as various other types of devices.

Terminal device **16504** may be configured to utilize the second waveform format with a wideband channel, e.g., where the second waveform format is a wideband waveform. For example, terminal device **16504** may require higher data rates to support video feeds. In accordance with the exemplary Wi-Fi setting, terminal device **16504** may utilize an e.g., 20 MHz IEEE 802.11 wideband channel to transmit and receive signals with network access node **16510.** As terminal devices **16502, 16506,** and **16508** may have less demanding data needs, terminal devices **16502, 16506,** and **16508** may be configured to utilize the first waveform format with a narrowband channel, e.g., where the first waveform format is a narrowband waveform. For example, smoke detectors, light bulbs, weight scales, and various other low-bandwidth IoT devices may not require high data rates and/or may transmit and receive data only sparingly and/or in low quantities. Continuing with the exemplary Wi-Fi setting, terminal devices **16502, 16506,** and **16508** may utilize a 2 MHz narrowband channel to transmit and receive signals with network access node **16510** and/or assisting device **16902.** As previously detailed, the narrowband channel may be single carrier, may have a low PAPR, may use a BPSK, QPSK, or GMSK modulation scheme, may be a spread spectrum, and/or may utilize a low data rate (e.g., in the kilobit range).

Use of the narrowband channel may reduce power consumption at terminal devices **16502, 16506,** and **16508.** High power efficiency may be important in IoT deployments such as the exemplary deployment shown in FIG. **178.** For example, in some aspects one or more of terminal devices **16502, 16506,** and **16508** may be powered with non-rechargeable batteries, such as a coin cell battery. In some aspects, one or more of terminal devices **16502, 16506,** and **16508** may be powered by rechargeable batteries. In some aspects, one or more of terminal devices **16502, 16506,** and **16508** may target long battery life, such as one year, five years, ten years, etc., which may reduce the frequency of battery replacements and/or recharging. In some aspects, one or more of terminal devices **16502, 16506,** and **16508** may be utilize solar power (e.g., if located outside) or ambient energy harvesting (e.g., if located inside) as a partial or sole power supply.

Terminal device **16502** may also reduce power consumption by using assisting device **16902** as a relay node to forward transmissions to network access node **16510.** As terminal device **16502** may be located closer to assisting device **16902** (such as in the same room as shown in FIG. **178)** than to network access node **16510** (which may be in a different room as shown in FIG. **178),** terminal device **16502** may utilize a lower transmission power to transmit to assisting device **16902** than would be sufficient to transmit to network access node **16510.** As assisting device **16902** may be an AC-powered device, assisting device **16902** may be able to receive uplink transmissions from terminal device **16502** (intended for network access node **16510)** and forward the uplink transmissions to network access node **16510** with greater transmission power (than used by terminal device **16502** for the original transmission).

In some aspects, network access node **16510** may transmit downlink transmissions to terminal device **16502** in the narrowband first waveform format with a narrowband channel (where the narrowband channel is a lesser portion of the wideband channel used by terminal device **16504).** In some aspects, network access node **16510** may protect the narrowband first format downlink transmissions to terminal device **16502** by encapsulating the narrowband first format downlink transmissions with a coexistence preamble, e.g., a header that is detectable and readable by other coexisting devices that are not using the narrowband channel and/or are using a different waveform format, which can include coexisting devices configured according to the first waveform format. For example, network access node **16510** may encapsulate the narrowband first format downlink transmissions with a 20 MHz IEEE 802.11 preamble. As coexisting terminal devices (operating on the wideband channel) such as terminal device **16504** may be able to detect and read first waveform format preambles, e.g., 20 MHz IEEE 802.11 preambles, terminal device **16504** may be able to detect the narrowband first format downlink transmissions and refrain from accessing the channel during the narrowband first format downlink transmissions.

In some aspects, assisting device **16902** may perform channel reservation assistance and/or coexistence preamble encapsulation for terminal device **16502,** such as in the manner detailed above regarding any of FIGs. **172-176.** Accordingly, assisting device **16902** may exchange RTS/CTS messages with network access node **16510** that specify a NAV. Coexisting terminal devices such as terminal device **16504** may detect the RTS/CTS messages and determine that the channel will be busy for the duration of the NAV. Terminal device **16502** may then transmit narrowband first format uplink transmission to assisting device **16902,** which may forward the narrowband first format uplink transmission to network access node **16510** before expiry of the NAV, after expiry of the NAV and after reserving the channel again (which may be a narrowband first format transmission), and/or after expiry of the NAV and after gaining access to the channel via contention (which may be a narrowband first format transmission encapsulated with a coexistence preamble). In some aspects, assisting device **16902** may perform common channel reservation for multiple of terminal devices **16502, 16508,** and **16508.**

In some aspects, collisions from coexisting networks may be avoided. For example, in addition to avoiding collisions from coexisting devices in the same network such as terminal device **16504,** assisting device **16902** may perform channel reservations and/or coexistence preamble encapsulation for terminal device **16502** that can protect transmissions by terminal device **16502** from transmissions by communication nodes of other networks, e.g., networks provided by network access nodes other than network access node **16510.**

Terminal devices (including IoT devices) may therefore be enabled to reduce power consumption while successfully coexisting with other terminal devices (e.g., terminal devices using a different waveform format). In particular, terminal devices may reduce uplink transmit power by using assisting devices as relay nodes. In some aspects, the terminal devices may also use waveform format that has low power characteristics, such as a narrowband waveform, a single carrier waveform, and/or a low PAPR waveform. In some aspects, assisting devices and/or network access nodes may assist in protecting transmissions to and from the terminal devices from collisions with channel reservation assistance and/or coexistence header encapsulation.

FIG. **179** shows method **17900** of performing radio communications at a terminal device in accordance with some aspects. As shown in FIG. **179,** method **17900** includes receiving a downlink radio transmission in a first waveform format from a network access node on a radio channel **(17910).** A notification is received from a forwarding device that indicates that the radio channel is protected from collisions with transmissions of a second waveform format during a reservation period **(17920).** An uplink radio transmission is transmitted in accordance with the reservation period to the forwarding device that instructs the forwarding device to route the uplink radio transmission to the network access node **(17930).**

FIG. **180** shows method **18000** of performing radio communications at a communication device in accordance with some aspects. As shown in FIG. **180,** method **18000** includes receiving, on a radio channel, an uplink radio transmission in a first waveform format from a terminal device that instructs the communication device to forward the uplink radio transmission to a network access node **(18010).** The uplink radio transmission is transmitted, on the radio channel, to the network access node with a preamble in a second waveform format to protect the uplink radio transmission from collisions **(18020).**

FIG. **181** shows method **18100** of performing radio communications at a communication device in accordance with some aspects. As shown in FIG. **181,** method **18100** includes communicating with a terminal device on a radio channel according to a first waveform format **(18110).** A transmission request is transmitted on the radio channel in a second waveform format to a network access node that specifies a reservation period **(18120).** A terminal device is notified that the radio channel is reserved for the reservation period **(18130).** A radio transmission is received in the first waveform format from the terminal device **(18140).** The radio transmission is transmitted to the network access node in accordance with the reservation period **(18150).**

5.2 Enhanced Communication #2

In some aspects, a vehicle may provide a local vehicle radio network for terminal devices traveling in the vehicle to access. When the terminal devices initially enter the vehicle, the local vehicle radio network may exchange context information with the terminal devices that indicates user data content preferences, e.g., information about one or more data files and/or types of data files (e.g., media or multimedia content) that users of the terminal devices will predictably access during travel. The local vehicle radio network may then use the context information to anticipate target data that the terminal devices may request during travel. The local vehicle radio network may then access an available internet connection to retrieve the target data and locally cache the target data. During travel (when the internet connection may no longer be available), if a terminal device requests any of the cached data from the local vehicle radio network, the local vehicle radio network may provide the requested data to the terminal device. The local vehicle radio network may also act as a gateway to an external radio network for the terminal devices during travel.

FIG. **182** shows an exemplary illustration of some aspects. As shown in FIG. **182,** vehicle **18202** may be initially located in loading area **18210** in scenario **18200a.** Loading area **18210** may include any general area where the vehicle **18202** is parked. Vehicle **18202** may be e.g., a bus, a plane, an airplane, a train, a car, a boat, or any other type of vehicle. Terminal devices **18206** and **18208** may enter vehicle **18202** at loading area **18210** and connect to a local vehicle radio network provided by vehicle network access node **18204** of vehicle **18202.** In some aspects, terminal devices **18206** and **18208** may be configured in the manner of terminal device **16502** as shown and described regarding FIG. **166.** Vehicle network access node **18204** may then predict target data that terminal device **18206** or **18208** may wish to access during travel. Vehicle network access node **18204** may then download the target data from loading network node **18212** (which may have an internet connection) via interface **18214** and locally store, or 'cache', the retrieved data (e.g., cached data). When vehicle **18202** is traveling, such as in scenario **18200b,** terminal device **18206** or **18208** may request certain data (e.g., one or more data files, which can include stored data files and active/ongoing data streams) from vehicle network access node **18204.** If vehicle network access node **18204** has already downloaded and cached requested data, vehicle network access node **18204** may provide the requested data to terminal device **18206** or **18208** via the local cloud network. If vehicle network access node **18204** does not have the requested data cached locally, terminal device **18206** or **18208** may utilize an external radio network, such as provided by network access node **18218,** to retrieve the requested data. Alternatively, vehicle network access node **18204** may act as a gateway between terminal device **18206** or **18208** and the external radio network and retrieve the requested data via network access node **18218.**

Accordingly, vehicle network access node **18204** may predict target data that terminal devices traveling on vehicle **18202** may request during travel. By retrieving the target data from a loading network node **18212** and caching the target data, vehicle network access node **18204** may provide data to the terminal devices on demand. The terminal devices may therefore not need to utilize an external radio network to retrieve the data, which may avoid depletion of data allotments of the terminal devices. In some aspects, the local vehicle radio network provided by vehicle network access node **18204** may be a high-capacity, highspeed, and/or high reliability connection (e.g., due to the close proximity within vehicle **18202),** which may enable terminal devices traveling in vehicle **18202** to quickly download any requested data that is locally cached by vehicle network access node **18204.** In some aspects, the local vehicle radio network provided by vehicle network access node **18204** may have higher speed/capacity/reliability than an external network used by terminal devices **18206** or **18208,** such as a cellular radio access network provided by network access node **18218.**

FIG. **183** shows an exemplary internal configuration of vehicle network access node **18204** in accordance with some aspects. As shown in FIG. **183,** vehicle network access node **18204** may include antenna system **18302,** radio module **18304,** communication module **18306** (including physical layer module **18308** and control module **18310),** and cache memory **18312.** Vehicle network access node **18204** may transmit and receive radio signals via antenna system **18302,** which may be an antenna array including one or more antennas. Radio module **18304** may perform transmit and receive RF processing to convert outgoing digital data from communication module **18306** into analog RF signals to provide to antenna system **18302** for radio transmission and to convert incoming analog RF signals received from antenna system **18302** into digital data to provide to communication module **18306.** Physical layer module **18308** may be configured to perform physical layer reception processing on digital data received from radio module **18304** to provide to control module **18310** and to perform physical layer transmission processing on digital data received from control module **18310** to provide to radio module **18304.** Control module **18310** may control the communication functionality of vehicle network access node **18204** according to the corresponding radio access protocols, which may include exercising control over antenna system **18302,** radio module **18304,** and physical layer module **18308.** In some aspects, communication module **18306** may also be configured to perform application-layer functions. Each of radio module **18304,** communication module **18306,** physical layer module **18308,** and control module **18310** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

In some aspects, vehicle network access node **18204** may be structurally integrated with vehicle **18202.** In some aspects, vehicle network access node **18204** may utilize a power supply that is part of or provided by vehicle **18202.** In some aspects, components of vehicle network access node **18204** may be mounted onto or into the frame of vehicle **18202.** For example, in some aspects antenna system **18302** may be deployed as a roof-mounted antenna. In some aspects, the components of vehicle network access node **18204** may be distributed at separate locations in vehicle **18202** and may be connected with one another via wired or wireless connections.

As previously indicated, vehicle network access node **18204** may retrieve target data from loading network node **18212** over interface **18214.** In some aspects, interface **18214** may be a radio interface. Accordingly, communication module **18306** may transmit and receive radio signals (via radio module **18304** and antenna system **18302)** with loading network node **18212** over interface **18214** according to specific radio access protocols. In some aspects, the radio access protocols may be cellular or short-range radio access protocols.

In some aspects, interface **18214** may be a wired interface (where both wired and radio options for interface **18214** are depicted for exemplary purposes in FIG. **183).** Accordingly, communication module **18306** may exchange digital data with loading network node **18212** over a wired connection. In some aspects, the wired connection may be e.g., an Ethernet or fiber connection. In some aspects where interface **18214** is a wired interface, vehicle **18202** may connect, or 'dock', with a docking station of loading area **18210** to complete the wired connection between vehicle network access node **18204** and loading network node **18212.** In some aspects where interface **18214** is a radio interface, vehicle network access node **18204** may connect with loading network node **18212** over interface **18214** (a wireless connection) when vehicle **18202** enters loading area **18210.**

Communication module **18306** may also interface with cache memory **18312.** Communication module **18306** may utilize cache memory **18312** to store cached data, such as cached data retrieved from loading network node **18212** based on target data that vehicle network access node **18204** anticipates that terminal devices traveling in vehicle **18202** will request. Communication module **18306** may receive requests for certain data (e.g., one or more data files, which may include e.g., movies, video clips, television show episodes, songs, podcasts, websites, files, albums, audiobooks, etc.) from terminal devices that are traveling in vehicle **18302,** such as terminal devices **18206** and **18208,** retrieve the requested data from cache memory **18312,** and provide the requested data to the requesting terminal device via radio module **18304** and antenna system **18302.**

FIG. **184** shows message sequence chart **18400** in accordance with some aspects. As shown in FIG. **184,** terminal device **18206** may initially enter vehicle **18202** in **18402.** In some aspects, terminal device **18208** may also perform the process of message sequence chart **18400.** After entering vehicle **18202** in **18402** (or moving within the vicinity of vehicle network access node **18204,** in other words, close enough to connect or detect), terminal device **18206** may connect with vehicle network access node **18204** in **18404.** For example, baseband modem **16606** of terminal device **18206** (where terminal device **18206** is configured in the manner of terminal device **16502** shown in FIG. **166)** may establish a radio connection with vehicle network access node **18204** (via exchange of connection/attach signals with RF transceiver **16604** and antenna system **16602),** which may be a software-level connection between baseband modem **16606** of terminal device **16502** and communication module **18306** of vehicle network access node **18204** that relies on a radio connection provided by antenna system **16602,** RF transceiver **16604,** antenna system **18302,** and radio module **18304** to transmit and receive radio signals.

After connecting in **18404,** terminal device **18206** and vehicle network access node 18204 may exchange context information in **18406.** The context information may be relevant for determining the target data (e.g., one or more data files) that terminal device **18206** may request during travel of vehicle **18202.** In some aspects, the context information may be trip duration information and/or user data content preference information. For example, in some aspects terminal device **18206** (under the control of baseband modem **16606)** may provide information related to the duration of time and/or distance that terminal device **18206** is expected to travel in vehicle **18202,** e.g., trip duration information. For example, terminal device **18206** may provide vehicle network access node **18204** with a target destination of terminal device **18206** (which may be, but not necessarily, initially provided by a user of terminal device **18206** via user input), an expected disembarking time, etc.

In some aspects, terminal device **18206** may provide context information in **18406** that indicates user data content preferences. For example, terminal device **18206** may identify types of multimedia (e.g., media content) that a user of terminal device **18206** frequently accesses. In an exemplary scenario, a user of terminal device **18206** may frequently watch a particular television show, may frequently watch a particular genre of television show or movie, may frequently listen to a particular music artist, may frequently listen to a particular genre of music, may frequently listen to a particular podcast, may frequently read a particular news or online website, may frequently access a particular video or image sharing/hosting website, etc. Numerous other scenarios, types of media content, and media access habits are also within the scope of this disclosure. Terminal device **18206** may then provide information that indicates such user data content preferences to vehicle network access node **18204.** In some aspects, terminal device **18206** may collect historical data) based on user interaction with terminal device **18206** that indicates user data. This historical data may be collected before initiation of the process of message sequence chart **18400,** such as during normal operation of terminal device **18206.** Terminal device **18206** may then determine the user data content preferences from the historical data and provide the user data content preferences to vehicle network access node **18204** in **18406.** In some aspects, the user data content preferences may indicate the likelihood or probability that a user of terminal device **18206** will request a particular data file or type of data file (e.g., movies, video clips, songs, albums, websites, etc.). In some aspects, the user data content preferences may indicate data (e.g., one or more data files) that a user of terminal device **18206** may request at a later time. In some aspects, the user data content preferences may indicate historical data regarding data that a user of terminal device **16502** has accessed. In some aspects, the user data content preferences indicate user habits for media content access or viewing. These aspects can be used with context awareness aspects described herein.

In some aspects, vehicle network access node **18204** may query terminal device **18206** for user data content preferences. In some aspects, when terminal device **18206** connects to vehicle network access node **18204,** vehicle network access node **18204** may direct terminal device **18206** to a user data content preference website or application. Terminal device **18206** may then load the user data content preference website or application and display the user data content preference website or application to a user of terminal device **18206** (e.g., at the application layer via application processor **16612** and user I/O components of terminal device 18206). Terminal device **18206** may then accept user input from a user of terminal device **18206** that specifies the user data content preferences, such as any of the types of user data content preferences (preferred movies, television shows, music, websites, etc.). Terminal device **18206** may collect the user data content preferences provided by the user and send the user data content preferences to vehicle network access node **18204** in **18406,** such as through the user data content preference website or application. A user of terminal device **18206** may therefore be able to select or specify the data that the user or terminal device **18206** may access or use during the trip.

In some aspects, the exchange of context information in **18406,** in addition to subsequent exchange of data between vehicle network access node **18204** and terminal devices via the local vehicle radio network, may be governed by specific communication protocols that define communication rules for exchange of wireless data. Vehicle network access node **18204** and terminal device **18206** may therefore exchange the context information in **18406** according to the communication protocols. In some aspects, vehicle network access node **18204** and terminal device **18206** may communicate over the local vehicle radio network using a short-range or a cellular radio access technology.

Vehicle network access node **18204** may then identify target data in **18408,** (e.g., one or more data files) that a user of terminal device **18206** may request during travel of vehicle **18202.** or data in general that the terminal device **18206** will use. In some aspects, communication module **18306** of vehicle network access node **18204** may process the context information in order to identify the target data in **18408.** For example, if terminal device **18206** provides a particular genre of television show or movie that a user of terminal device **18206** frequently watches, vehicle network access node **18204** may identify one or more television shows or movies of the particular genre as target data in **18408.** In another example, terminal device **18206** may provide the identity of a television show that a user of terminal device **18206** is currently watching, such as by accessing a video-on demand website or application that the user watches the television show on. Vehicle network access node **18204** may then identify the television show as target data in **18408.** In some aspects, terminal device **18206** may also provide a current episode (e.g., by accessing the video-on demand website or application to identify previously viewed video content) of the television show. Vehicle network access node **18204** may then identify the current episode (optionally in addition to one or more upcoming episodes) as target data in **18408.** In another example, if terminal device **18206** provides a particular website (e.g., a news website, an image/video hosting/sharing website, etc.) that a user of terminal device **18206** frequently visits, vehicle network access node **18204** may identify website data of the particular website as target data in **18408.** In another example, if terminal device **18206** provides a particular podcast that a user of terminal device **18206** frequently listens to, vehicle network access node **18204** may identify a current podcast episode as target data in **18408.**

In some aspects, vehicle network access node **18204** may identify the target data in **18408** based on the trip duration information. For example, in an exemplary scenario, the trip duration information provided by terminal device **18206** may indicate that terminal device **18206** is expected to travel on vehicle **18202** for a short duration of time (e.g., less than an hour, several hours, etc.). In another exemplary scenario, the trip duration information provided by terminal device **18206** may indicate that terminal device **18206** is expected to travel on vehicle **18202** for a long duration of time (e.g., five hours, ten hours, one day, etc.). As users taking long trips may be expected to access more data, network access node **18204** may be configured to identify a larger amount of target data in **18408** if the trip duration information indicates that terminal device **18206** will take a long trip compared to if the trip duration information indicates that terminal device **18206** will take a short trip.

In some aspects, vehicle network access node **18204** (at communication module **18306)** may also utilize spatial-temporal trip information to identify the target data in **18408.** For example, there may be certain times of day when terminal devices can be expected to access more data during trips than others. For example, users can be expected to access more data during daytime than nighttime (when some users may be sleeping). In some aspects, vehicle network access node **18204** may identify a larger amount of target data in **18408** if terminal device **18206** is taking a daytime trip (which may be indicated by trip duration information) than if terminal device **18206** is taking a nighttime trip.

In another example, certain data may be popular in certain geographical areas, such as 'viral' videos that are popular in a given geographic area, news websites that provide coverage focused in a given geographic area, etc. Vehicle network access node **18204** may therefore identify spatial-temporal trip information that indicates a geographic area that vehicle **18202** is currently in and/or is travelling through. Vehicle network access node **18204** may then identify target data based on the geographic area, such as content that is popular in the geographic area. In some aspects, vehicle network access node **18204** may access the internet (via loading network node **18212** over interface **18214)** to determine which content is popular in the identified geographic area. In some aspects, a library of content may be downloaded according to aforementioned aspects, e.g., popularity, preferences, geographic area, etc.

As previously indicated, in some aspects communication module **18306** of vehicle network access node **18204** may process the context information, in addition to other spatial-temporal trip information (if any), to identify the target data in **18408.** For example, communication module **18306** may perform machine learning-based techniques to 'learn' what types of data that users of terminal devices frequently access while on trips. Nonlimiting examples of machine learning techniques that communication module **18306** can apply include supervised or unsupervised learning, reinforcement learning, genetic algorithms, rule-based learning support vector machines, artificial neural networks, Bayesian-tree modeling, or hidden Markov modeling. In some aspects, communication module **18306** calculates a likelihood that certain data will be accessed by terminal device **18206.** For example, communication module **18306** may determine that a television show that a user has watched multiple episodes and/or seasons of (as indicated in the user data content preference information provided in **18406)** is more likely to be accessed during the trip than a television show that a user has only watched e.g., one episode of. In another example, communication module **18306** may determine that new episodes of television show that a user of terminal device **18206** recently watched television show is more likely to be accessed during the trip than a television show that the user has not watched recently. In another example, communication module **18306** may determine that an episode or movie in a user's queue (e.g., at a video-on demand website or application) is more likely to be watched during the trip than episodes or movies that are not in the user's queue. In some aspects, communication module **18306** may calculate a probability metric (that indicates a likelihood of being accessed during the trip) for different data (e.g., different data files) based on the context information and/or spatial-temporal trip information and select the data (e.g., one or more data files) with the highest probability metric as the target data in **18408.** In some aspects, communication module **18306** may select a predefined number of data files with the highest probability metrics (where the probability metrics indicated the likelihood or probability that a terminal device will request the data during travel) as the target data in **18408.** In some aspects, communication module **18306** may select the data files with the highest probability metrics up to a predefined total data size (which may be e.g., dependent on the total capacity or remaining capacity of cache memory **18312)** as the target data in **18408.**

In some aspects, communication module **18306** may process the context information and/or spatial-temporal trip information with a probabilistic (or predictive) algorithm that is embodied as software-defined program code (and retrievable from a non-transitory computer readable medium), where the probabilistic algorithm may assign probability scores (or predictive weights) to different data (e.g., one or more data files). Communication module **18306** may then identify the target data in **18408** based on the probability scores, which may be a quantitative analysis of the context information and/or spatial-temporal trip information. In some aspects, communication module **18306** may access the internet (via loading network node **18212)** to exchange learning results and/or current trends, which may e.g., originate from vehicle network access nodes in other vehicles.

In some aspects, vehicle network access node **18204** may consider the user data content preference information from multiple terminal devices in identifying the target data in **18408.** For example, multiple terminal devices may provide network access node **18204** with user data content preference information. Communication module **18306** of network access node **18204** may then aggregate the user data content preference information to identify data that is most likely to be accessed by any of the terminal devices e.g., that have the highest collective probability of being requested by the terminal devices. Communication module **18306** may then be configured to identify the target data **18408** based on the collective probabilities, e.g., based on the user data content preference information from multiple terminal devices.

After identifying the target data in **18408,** vehicle network access node **18204** may access loading network node **18212** to request and receive the target data in **18410** and **18412.** Accordingly, vehicle network access node **18204** may request the target data from loading network node **18212** via interface **18214** in **18410.** Vehicle network access node **18204** may request the target data while vehicle **18202** is still in loading area **18210,** e.g., when interface **18214** is still active between loading network node **18212** and vehicle network access node **18204.**

As previously indicated, in some aspects, interface **18214** may be a radio interface. Accordingly, loading network node **18212** may be a network access node such as a base station or an access point. In some aspects, interface **18214** may provide a high-speed or high-speed/capacity/reliability wireless connection between loading network node **18212** and vehicle network access node **18204,** which may enable vehicle network access node **18204** to quickly download large amounts of data via loading network node **18212** via a wireless connection. Alternatively, in some aspects, interface **18214** may be a wired interface, such as an Ethernet or fiber interface. Accordingly, loading network node **18212** may be a router or gateway. In some aspects, interface **18214** may provide a high-speed/capacity/reliability wired connection between loading network node **18212** and vehicle network access node **18204,** which may enable vehicle network access node **18204** to quickly download large amounts of data (e.g., in the order of hundreds of gigabytes, terabytes, etc.) via loading network node **18212** via a wired connection.

Loading network node **18212** may interface (via a backhaul interface) with the internet, and accordingly may provide vehicle network access node **18204** with an internet connection. In some aspects where interface **18214** is a radio interface, loading network node **18212** may interface with a core network (such as a cellular core network) that provides internet access. In some aspects where interface **18214** is a wired interface, loading network node **18212** may include or may interface with an internet router configured to query and receive internet data from various internet locations and servers.

Accordingly, after receiving the request for target data from vehicle network access node **18204** in **18410,** loading network node **18212** may retrieve the target data from the internet in **18412.** For example, if the target data requested by vehicle network access **18204** is a movie or television show from an on-demand video website or application, loading network node **18212** may download the movie or television show from a server of the on-demand video website or application in **18412.** In another example, if the target data requested by vehicle network access node **18204** is a website, loading network node **18212** may download website data (including e.g., one or more sections, pages, article, etc., of the website) from a server supporting the website in **18412.** In another example, if the target data requested by vehicle network access node **18204** is one or more videos from a video hosting website, loading network node **18212** may download the one or more videos from a server of the video hosting website in **18412.** In another example, if the target data requested by vehicle network access node **18204** is music files from a music streaming website or application, loading network node **18212** may download the music files from a server of the music streaming website or application. In some aspects where the target data is accessible with subscriber information (e.g., a subscriber login for a video on-demand website, a subscriber login for a music streaming website, etc.), terminal device **18206** may provide the subscriber information to vehicle network access node **18204,** which may then provide the subscriber information to loading network **18212** with the target data request in **18410.** Loading network node **18212** may then access the target data from the associated servers with the subscriber information. In some aspects, vehicle network access node **18204** may have a subscription and may provide loading network node **18212** with the subscriber information for vehicle network access node **18204.**

Loading network node **18212** may then provide the target data to vehicle network access node **18204** in response to the target data request in **18414.** In some aspects, loading network node **18212** may not be able to retrieve some of the requested target data in **18412.** Loading network node **18212** may notify vehicle network access node **18204** of any target data that loading network node **18212** was not able to retrieve. In some aspects, if loading network node **18212** is unable to retrieve some of the requested data, vehicle network access node **18204** may attempt to access the unretrieved data at a later time, such as when vehicle network access node **18204** connects to another loading network node.

Vehicle network access node **18204** may then cache the target data in **18416.** In some aspects, communication module **18306** of vehicle network access node **18204** may receive the target data from loading network node **18212** over interface **18214** (either wired or radio) and store the target data in cache memory **18312** in **18416.**

Accordingly, vehicle network access node **18204** may retrieve target data that a user of terminal device **18206** may access during travel of vehicle **18202.** Vehicle network access node **18204** may complete caching of target data in **18416** while vehicle **18202** is still located in loading area **18210** (as interface **18214** may remain active while vehicle **18202** is located in the vicinity of loading area **18210,** e.g., via wired docking or wireless radio connection). In some aspects, vehicle network access node **18204** may collect context information, identify target data, retrieve the target data, and cache the target data (e.g., in the manner of **18404-18416)** for multiple terminal devices that enter vehicle **18202** while in loading area **18210.** For example, vehicle network access node **18204** may identify target data for terminal device **18208,** which may be different from the target data for terminal device **18206** (based on different context information, e.g., trip duration information and/or user data content preference information, provided by terminal device **18208).** Vehicle network access node **18204** may then retrieve and cache the target data terminal device **18208.** In some aspects, vehicle network access node **18204** may request and receive the target data for terminal devices **18206** and **18208** in the same target data request to loading network node **18212.** In some aspects, vehicle network access node **18204** may request and receive the target data for terminal devices **18206** and **18208** in different target data requests to loading network node **18212.** Vehicle network access node **18204** may therefore retrieve and cache target data for multiple different terminal devices.

As shown in FIG. **182,** vehicle **18202** may begin traveling and leave loading area **18210** (as denoted between scenario **18200a** and scenario **18200b).** After leaving loading area **18210,** interface **18214** between vehicle network access node may be disconnected (e.g., as a wired docking connection may be disconnected or vehicle **18202** may move outside of the wireless range of loading network node **18212).** As terminal devices **18206** and **18208** are located inside vehicle **18202,** terminal devices **18206** and **18208** may be stationary relative to vehicle **18202** (in addition to limited movement inside vehicle **18202),** and may remain within range and connected to vehicle network access node **18204.**

Accordingly, terminal device **18206** may request data (e.g., one or more data files) from vehicle network access node **18204** in **18418.** Vehicle network access node **18204** may then determine whether the requested data is in cache memory **18312** in **18420.** For example, communication module **18306** may receive the data request from terminal device **18206** in **18418** (via antenna system **18302** and radio module **18304).** The data request may specifically identify data that terminal device **18206** is requesting. For example, the data request may identify e.g., a movie, a video clip, an episode of a television show, a song, a podcast, a website, a file, an album, etc. Communication module **18306** may then query cache memory **18312** in **18420** whether the requested data is stored in cache memory **16602.**

If communication module **18306** determines in **18420** that the requested data is stored in cache memory **18312,** communication module **18306** may retrieve the requested data from cache memory **18312** and provide the requested data to terminal device **18206** in **18424** (as shown in conditional block **18422** referenced by the "Yes" vertex of **18420).** Accordingly, terminal device **18206** may be able to retrieve the requested data locally from vehicle network access node **18204,** and neither vehicle network access node **18204** nor terminal device **18206** may utilize an external network (e.g., network access node **18218)** to provide the requested data to terminal device **18206.** After receiving the requested data from vehicle network access node **18204,** terminal device **18206** may present the requested data to a user of terminal device **18206** (e.g., at an application layer of application processor **16612** via user I/O, e.g., a visual display/screen, audio speakers, etc.).

In some aspects, vehicle network access node **18204** may have previously retrieved the requested data via loading network node **18212** while vehicle **18202** was in loading area **18210** in scenario **18200a.** Alternatively, in some aspects, network access node **18204** may have previously retrieved the requested data via another loading network node while vehicle **18202** was at a different loading area. In some aspects, network access node **18204** may have retrieved the requested data via loading network node **18212** in response to context information provided by terminal device **18206.** In some aspects, network access node **18204** may have retrieved the requested data via loading network node **18212** in response to context information provided by another terminal device, such as terminal device **18208.**

If communication module **18306** of vehicle network access node **18204** determines in **18420** that the requested data is not in cache memory **18312,** vehicle network access node **18204** may inform terminal device **18206** that the requested data is not available in **18428** (as shown in conditional block **18426** referenced by the "No" vertex of **18420),** e.g., that the requested data is not locally available by vehicle network access node **18204.** As shown in FIG. **182,** in an exemplary scenario, vehicle **18202** may be within coverage area **18216** of network access node **18218.** Terminal device **18206** (under the control of baseband modem **16606**) may therefore retrieve the data from network access node **18218.** In some aspects, network access node **18218** may be a cellular network access node, e.g., a base station, and may provide internet access via a core network. In some aspects, network access node **18218** may be a roadside unit (RSU). In some aspects, network access node **18218** may be a short-range network access node, e.g., an access point, and may provide internet access via an internet router. Accordingly, terminal device **18206** may utilize network access node **18218** as a radio access connection to interface with the internet via network access node **18218.** Terminal device **18206** may therefore request the data via network access node **18218** in **18430** and receive the data from network access node **18218** in **18432.** In some aspects, terminal device **18206** may establish an IP connection with an internet server or data network that is storing the requested data (e.g., Packet Data Network (PDN)) via network access node **18218** and exchange data, including the requested data, with the internet server or data network storing the requested data (which may include routing of data through a core network connected to network access node **18218** to a network gateway that interfaces with the internet server or data network). Terminal device **18206** may therefore receive the requested data from network access node **18218** in **18432.** In some aspects, terminal device **18206** can utilize aspects described above regarding any of FIGs. **169-181** to transmit and/or receive with vehicle network access node **18204** using a low-power waveform format (e.g., the first waveform format) and to transmit and receive with network access node **18218** with a higher-power waveform format (e.g., the second waveform format). Vehicle network access node **18204** may in some aspects perform channel reservation assistance and/or preamble header encapsulation in addition to relaying to assist terminal device **18206** in transmitting and receiving with network access node **18218.**

In some aspects, the local vehicle radio network provided by vehicle network access node **18204** may provide a high-speed/capacity/reliability connection, which may be higher speed speed/capacity/reliability than the radio connection provided by network access node **18218.** Accordingly, in some aspects, terminal device **18206** may be able to receive the requested data faster from vehicle network access node **18204** (e.g., if the requested data is cached at vehicle network access node **18204,** such as in the case of conditional block **18422)** than from network access node **18218** (e.g., if the requested data is not cached at vehicle network access node **18204,** such as in the case of conditional block **18426).** In some aspects, terminal device **18206** may not utilize any of a data allotment if receiving the requested data from network access node **18204,** e.g., may not utilize data from a monthly subscriber data allotment, which may reduce user costs. If terminal device **18206** receives the requested data from an external radio network, such as network access node **18218,** the received data may count against a data allotment and deplete the remaining data allotment. Data retrieval times and/or data plan depletion may be reduced. Furthermore, according to some aspects, exchanging data over an external radio network (and instead provide requested data to terminal devices via a local cache memory) may be avoided, so as to reduce network traffic and congestion.

Additionally, in some aspects, terminal device **18206** may 'stream' the requested data from vehicle network access node **18204** in **18424** or from network access node **18218** in **18432.** Accordingly, the quality and capacity of the radio connection between terminal device **18206** and vehicle network access node **18204/network** access node **18218** may in some aspects affect streaming quality. Accordingly, as the local vehicle radio network provided by vehicle network access node **18204** may have higher speed/capacity/reliability than the external radio network provided by network access node **18218,** stream quality may be higher when streaming from vehicle network access node **18204** compared to network access node **18218.** Receiving the requested data from vehicle network access node **18204** may therefore be preferable to receiving the requested data from network access node **18218.**

In some aspects, the request and provision of data between vehicle network access node **18204** and terminal device **18206** may include further exchange of data. For example, in some aspects, vehicle network access node **18204** may provide a list of cached data to terminal device **18206,** which may list the data stored in cache memory **18312.** In some aspects where vehicle network access node **18204** caches target data for multiple terminal devices, vehicle network access node **18204** may provide a complete list of data stored in cache memory **18312,** which may include data retrieved specifically for terminal device **18206** in addition to data retrieved for other terminal devices, e.g., terminal device **18208.**

In some aspects, vehicle network access node **18204** may provide the list of cached target data as a multimedia website or application, which vehicle network access node **18204** may send to terminal device **18206.** Terminal device **18206** may receive and load the multimedia website or application and present the multimedia website or application to the user (via user I/O of terminal device **18206).** The user may then select data from the list of cached target data, which terminal device **18206** may receive as input and send to vehicle network access node **18204** as a data request in **18418.** As the list can indicate the data stored in cache memory **18312,** vehicle network access node **18204** may determine that the requested data is in cache memory **18312** in **18420.** Vehicle network access node **18204** may then retrieve the requested data from cache memory **18312** and provide the requested data to terminal device **18206** in **18424.** In some aspects, provision of a complete list of cached data may avoid 'failed' requests, e.g., as in **18428** when vehicle network access node **18204** does not have the requested data stored in cache memory **18312.**

FIG. **185** shows message sequence chart **18500** according to some aspects. Loading network node **18212,** vehicle network access node **18204,** and terminal device **18206** may perform **18502-18524** in the manner of **18402-18424,** respectively. Accordingly, vehicle network access node **18204** may determine in **18520** whether the data requested by terminal device **18206** is stored in cache memory **18312.** If the requested data is stored in cache memory **18312,** vehicle network access node **18204** may retrieve the requested data from cache memory **18312** and provide the requested data to terminal device **18206** in **18524** (as shown in conditional block **18522** referenced by the "Yes" vertex of **18520).** However, if the requested data is not stored in cache memory **18312,** vehicle network access node **18204** may retrieve the requested data from network access node **18218** and provide the requested data to terminal device **18206** in **18528-18532** (as shown in conditional block **18526** referenced by the "No" vertex of **18520).** Accordingly, instead of notifying terminal device **18206** that the requested data is not available (e.g., as in **18428),** vehicle network access node **18204** may request the requested data from network access node **18218** in **18528.** Network access node **18218** may then retrieve the requested data via an internet connection (e.g., through a core network or internet router, such as from an internet server or data network storing the requested data) and provide the requested data to vehicle network access node **18204** in **18530.** After receiving the requested data from network access node **18218** in **18530,** vehicle network access node **18204** may provide the requested data to terminal device **18206** in **18532.** Accordingly, terminal device **18206** may receive the requested data without accessing an external radio network, as vehicle network access node **18204** may retrieve the data via an external radio network provided by network access node **18218.** In some aspects, vehicle network access node **18204** may store data received from network access node **18218** in cache memory **18312** (in addition to providing the data to terminal device **18206),** and may provide the data to other terminal devices upon request.

In some aspects, vehicle network access node **18204** may be configured with higher transmission power and/or processing power than terminal device **18206.** In some aspects, vehicle network access node **18204** may be configured with more advanced transmission and reception features, such as more advanced beamforming, more advanced beamsteering, more antennas, etc., than terminal device **18206.** In some aspects, vehicle network access node **18204** may be able to exchange data with network access node **18218** at a higher speed/capacity/reliability, and/or at a greater range than what terminal device **18206** is capable of. For example, if vehicle **18202** is e.g., a train, vehicle network access node **18204** may have access to a power source (via vehicle **18202)** that has much higher capacity and peak power than the power supply of terminal device **18206,** which may be powered by e.g., a small battery. Additionally, the larger area provided by vehicle **18202,** e.g., the train body and structure, may provide greater space for larger and more powerful components. For example, antenna system **18302** of vehicle network access node **18204** may be deployed on the train structure (e.g., as a roof-mounted antenna) and/or radio module **18304** may be a large radio power amplifier capable of much higher transmit powers than terminal device **18206.** Radio module **18304** and communication module **18306** may also include more complex processing components capable of higher-performance transmission and reception processing than RF transceiver **16604** and baseband modem **16606** of terminal device **18206.** Similar power and processing aspects may also be realized in variety of other vehicle types for vehicle **18202,** such as buses, cars, planes, boats, etc.

Accordingly, in some aspects, it may be appropriate for vehicle network access node **18204** to retrieve the requested data from network access node **18218** (instead of terminal device **18206** retrieving the requested data from network access node **18218).** For example, in some exemplary scenarios, terminal device **18206** may not have sufficient uplink transmit power to reach network access node **18204** and/or may be too far from network access node **18204** to effectively receive downlink signals. However, the superior transmission and reception performance of vehicle network access node **18204** (as noted above) may enable vehicle network access node **18204** to communicate with network access node **18218.** Furthermore, the higher performance of vehicle network **18204** may enable vehicle network access node **18204** to transmit and receive data with network access node **18218** with higher data rates and/or reliability. Accordingly, it may in some scenarios be appropriate for network access node **18204** to acquire the requested data from network access node **18218** and provide the requested data to terminal device **18206** via the local vehicle radio network.

Furthermore, in some aspects vehicle network access node **18204** may be configured to operate on a different radio access technology for external radio networks than terminal device **18204** and/or may have a different service provider than terminal device **18204.** For example, in an exemplary scenario, vehicle network access node **18204** and network access node **18218** may be configured to operate according to a first radio access technology and terminal device **18206** may be configured to operate according to a second radio access technology. Due to the differing radio access technologies, terminal device **18206** may not be able to communicate with network access node **18218** (as network access node **18218** is not configured to operate according to the second radio access technology), while vehicle network access node **18204** may be able to communicate with network access node **18218** via the first radio access technology. In another exemplary scenario, vehicle network access node **18204** and network access node **18218** may have a first service provider and terminal device **18206** may be configured to operate according to a second provider. Due to the differing service providers, terminal device **18206** may not be able to communicate with network access node **18218** or may have to use roaming to communicate with network access node **18218.** However, vehicle network access node **18204** may be able to communicate with network access node **18218** via the first service provider. Accordingly, scenarios may occur where it may be more efficient for vehicle network access node **18204** to communicate with network access node **18218,** and may consequently be appropriate for network access node **18204** to retrieve the requested data via network access node **18218** for terminal device **18206.**

After receiving the requested data from network access node **18218** in **18530,** vehicle network access node **18204** may provide the requested data to terminal device **18206** in **18532.** In some aspects, the radio connection between vehicle network access node **18204** and terminal device **18206** (over the local vehicle radio network) may be different from the radio connection between vehicle network access node **18204** and network access node **18218.** For example, vehicle network access node **18204** may utilize a first radio access technology to communicate with terminal device **18206** and a second radio access technology to communicate with network access node **18218.** In some aspects, the first radio access technology may be a short-range radio access technology and the second radio access technology may be a cellular radio access technology. In some aspects, network access node **18204** may utilize different subcomponents of antenna system **18302,** radio module **18304,** and/or communication module **18306** to communicate with terminal device **18206** than with network access node **18218.** For example, antenna system **18302,** radio module **18304,** and/or communication module **18306** may include a first subsection configured to transmit and receive signals according to the first radio access technology and further include a second subsection configured to transmit and receive signals according to the second radio access technology. Additionally, in some aspects vehicle network access node **18204** may utilize a satellite radio access technology to communicate with network access node **18218,** such as if vehicle **18202** is an airplane, a boat, a train, etc., while vehicle network access node **18204** may utilize a short-range or cellular radio access technology to communicate with terminal device **18206.**

Accordingly, in some aspects of FIG. **185,** vehicle network access node **18204** may have previously pre-loaded (or 'cached') data, via a high-speed/capacity/reliability connection loading network node **18212,** based on a probability that terminal device **18206** will request the data during travel of vehicle. If terminal device **18206** requests the pre-loaded data during travel, e.g., after the high speed/capacity/reliability connection is disconnected, vehicle network access node **18204** may provide the pre-loaded data from a cache memory via the local vehicle radio network. As the local vehicle radio network may be short range, this may enable fast delivery of the pre-loaded data to terminal device **18206.** If terminal device **18206** request data that is not-preloaded, vehicle network access node **18204** may retrieve the requested data via an external radio network with network access node **18218.** While the connection between vehicle network access node **18204** and network access node **18218** may not be as high-speed/capacity/reliability as the connection with loading network node **18212** (used to pre-load data), the connection between vehicle network access node **18204** and network access node **18218** may be superior (e.g., higher speed/capacity/reliability) than another connection between terminal device **18206** and network access node **18218** (or another network access node serving terminal device **18206).** Accordingly, aspects disclosed herein may be appropriate in exemplary scenarios where vehicle network access node **18204** has not pre-loaded the requested data.

In some aspects, such as in the case of message sequence chart **18500,** vehicle network access node **18204** may act as a gateway between terminal devices traveling in vehicle **18202** and the external radio network provided by network access node **18218.** For example, vehicle network access node **18204** may receive data requests from terminal devices traveling in vehicle **18202,** such as terminal device **18206,** and fulfill the data requests by either retrieving the requested data locally from cache memory **18312** (e.g., as in **18524)** or by retrieving the requested data externally via network access node **18218.** In some aspects, communication module **18306** of vehicle network access node **18204** may therefore perform gateway functionality in receiving data requests from terminal devices and routing the data requests to an external radio network, e.g., as provided by network access node **18218.**

In some aspects, terminal device **18206** may not be aware of whether vehicle network access node **18204** provides the requested data from cache memory **18312** (e.g., in **18524**) or retrieves and provides the requested data via network access node **18218** (e.g., in **18528-18532)** (other than potential differences in retrieval time). For example, terminal device **18206** may connect and interact with vehicle network access node **18204** in a conventional manner for network access nodes. For example, if terminal device **18206** visits a website on a browser application of terminal device **18206** (while connected to vehicle network access node **18204),** terminal device **18206** may request the website data from vehicle network access node **18204** in **18518,** which may be e.g., a Hypertext Transfer Protocol (HTTP) request addressed to an internet server storing the website data. In other exemplary scenarios, e.g., for movies, songs, podcasts, video clips, etc., terminal device **18206** may transmit a similar internet data request to an internet server as part of a conventional internet connection procedures.

Communication module **18306** of vehicle network access node **18204** may then act as a gateway for terminal device **18206.** For example, communication module **18306** may inspect the internet data request to determine how to fulfill the internet data request. In some aspects, communication module **18306** may inspect internet traffic (e.g., with deep packet inspection (DPI)) originating from terminal device **18206** to identify any internet data requests. If communication module **18306** identifies an internet data request transmitted by terminal device **18206,** communication module **18306** may 'intercept' the internet data request and determine how to fulfill the internet data request, e.g., either with locally stored data at cache memory **18312** or via externally retrieved data from network access node **18218.** Communication module **18306** may therefore reference cache memory **18312** in **18520** to determine whether the data requested in the internet data request (e.g., the HTTP request) is stored in cache memory **18312.** If the requested data is stored in cache memory **18312,** communication module **18306** may retrieve the requested data from cache memory **18312** and provide the requested data to terminal device **18206** in **18524.** As terminal device **18206** may have sent the internet data request as part of a conventional internet connection procedure (e.g., in the manner as if terminal device **18206** was connected to any network access node), terminal device **18206** may not be aware that vehicle network access node **18204** retrieved the requested data from cache memory **18312.**

If communication module **18306** of vehicle network access node **18204** determines in **18520** that the requested data is not stored in cache memory **18312,** communication module **18306** may then utilize the external radio connection by network access node **18218** to retrieve the requested data. Accordingly, communication module **18306** may transmit the internet data request to network access node **18218** in **18528,** where the internet data request may be addressed to the internet server storing the requested data. Network access node **18218** which may forward the internet data request to the internet server (e.g., via a core network or internet router) and may provide the requested data to vehicle network access node **18204.** Vehicle network access node **18204** may then provide the requested data to terminal device **18206** in **18530.**

In some aspects, vehicle network access node **18204** may provide multicast streaming to multiple terminal devices traveling in vehicle **18202.** For example, vehicle network access node **18204** may perform multicast streaming of data stored in cache memory **18312** to multiple terminal devices, e.g., terminal device **18206** and terminal device **18208.** Accordingly, network access node **18204** may provide a radio signal (via radio module **18304** and antenna system **18302)** containing a data stream (retrieved from cache memory **18312)** that is accessible by terminal devices **18206** and **18208.** In some aspects, instead of retrieving the data stream from cache memory **18312,** vehicle network access node **18204** may receive the data stream from network access node **18218** over the external radio network and rebroadcast the data stream over the local vehicle radio network to terminal device **18206** and **18208.**

In some aspects, vehicle network access node **18204** may transfer between different network access nodes while vehicle **18202** is traveling. For example, as shown in FIG. **186,** vehicle **18202** may move from coverage area **18216** of network access node **18218** (as shown in scenario **18200b** of FIG **182)** to coverage area **18616** of network access node **18618** (as shown in scenario **18600a** of FIG. **186).** Accordingly, instead of exchanging data with network access node **18218,** vehicle network access node **18204** may exchange data with network access node **18618** via interface **18620,** such as to retrieve data requested by terminal devices **18206** and **18208** from the internet. In some aspects, vehicle network access node **18204** may continue to transfer between network access nodes as vehicle **18202** travels, such as according to mobility procedures governed by signal strength and/or signal quality.

In some aspects, vehicle **18202** may eventually stop at loading area **18610** (as shown in scenario **18600b)** of FIG. **186.** As shown in FIG. **186,** loading area **18610,** which may include a general parking area, may include loading network node **18612.** Vehicle network access node **18204** may then interface with loading network node **18612,** e.g., either by 'docking' with a wired interface or wirelessly via a radio interface. In some aspects, vehicle network access node **18204** may then repeat target data identification, retrieval and caching via loading network node **18612** (e.g., as in **18508-18516** or **18408-18416).** In some aspects, vehicle network access node **18204** may establish new connections (e.g., as in **18404** or **18504**) with terminal devices that enter vehicle **18202at** loading area **18610,** and may exchange context information with these terminal devices (e.g., as in **18406** or **18506).** Vehicle network access node **18204** may then identify target data for these terminal devices, retrieve the target data, and cache the target data at cache memory **18312** (e.g., as in **18508-18516** or **18408-18416).** In some aspects, vehicle network access node **18204** may exchange updated context information with terminal devices that remain in vehicle **18202,** e.g., terminal device **18206** or **18208,** identify updated target data based on the updated context information, and retrieve and cache the updated target data via loading network node **18612.** In some aspects, vehicle network access node **18204** may clear certain data from cache memory **18312,** such as data that a terminal device has already accessed during travel of vehicle **18202** and/or data that was cached for a terminal device that has left vehicle **18202.**

In some aspects, vehicle network access node **18204** and terminal devices traveling in vehicle **18202** may interface with different network access nodes during travel. FIG. **187** shows exemplary scenario **18700** in accordance with some aspects where vehicle network access node **18204** may interface with network access node **18702,** terminal device **18206** may interface with network access node **18704,** and terminal device **18208** may interface with network access node **18706.** In some aspects, network access nodes **18702, 18704,** and **18706** may be operated by different network operators. In some aspects, vehicle network access node **18204,** terminal device **18206,** and terminal device **18208** may be subscribers of different networks according to the respectively different network operators of network access nodes **18702, 18704,** and **18706.** Accordingly, in some aspects vehicle network access node **18204** may interface with a different network access node than e.g., terminal device **18206** or **18208** when retrieving data via an external radio network.

In some aspects, communication module **18306** of vehicle network access node **18204** may perform machine learning in order to 'learn' what data users of terminal devices will request. Communication module **18306** may therefore update the logic (e.g., a predictive algorithm defined as software code) used to identify target data in **18408/18508** by applying machine learning to evaluate the data that users accessed while vehicle **18202** was traveling vs. the data that users did not access while vehicle **18202** was traveling. Communication module **18306** may therefore adapt identification of target data over time. In some aspects, communication module **18306** may also utilize loading network node **18612** to exchange learning results and/or current trends with other vehicle network access nodes, e.g., via a direct internet connection or via a central server that stores learning results/current trends provided by vehicle network access nodes.

In some aspects, vehicle network access node **18204** may also utilize terminal devices traveling on vehicle **18202** as caches. For example, vehicle network access node **18204** may retrieve data cached at e.g., terminal device **18208** to respond to a data request for the cached data from terminal device **18206.** For example, in addition to exchanging context information in **18406** or **18506,** terminal devices entering vehicle **18202** may provide information to vehicle network access node **18204** that details data (e.g., one or more data files, which includes stored data files and active/ongoing data streams) that are stored by the terminal devices. For example, terminal device **18208** may notify vehicle network access node **18204** of one or more data files that terminal device **18208** has locally stored. Vehicle network access node **18204** may store a record of such information in cache memory **18312.** If terminal device **18206** later requests a first data file of the one or more data files, vehicle network access node **18204** may retrieve the first data file from terminal device **18208** over the local vehicle radio network and provide the first data file to terminal device **18206.** In some aspects, vehicle network access node **18204** may utilize terminal devices traveling in vehicle **18202** for cache storage, such as by retrieving target data from loading network node **18212** and providing the target data to a terminal device, e.g., terminal device **18208,** for storage. If terminal device **18206** requests the target data during travel, vehicle network access node **18204** may retrieve the target data from terminal device **18208** and provide the target data to terminal device **18206.**

In some aspects, there may not be an available external radio network during travel of vehicle **18202.** For example, vehicle **18202** may travel through an area which is not within the coverage area of any network access nodes that provide an external radio network. Accordingly, vehicle network access node **18204** may only be able to provide data to requesting terminal devices that is already stored in cache memory **18312** (or, if using terminal devices for caching, that is already cached at a terminal device in vehicle **18202).**

In some aspects, terminal devices traveling in vehicle **18202** may choose between receiving data from vehicle network access node **18204** over the local vehicle radio network or from a network access node that provides an external radio network. For example, terminal device **18206** may be configured to evaluate radio conditions of the local vehicle radio network provided by vehicle network access node **18204** versus radio conditions of an external radio network, e.g., as provided by network access node **18218.** For example, baseband modem **16606** of terminal device **18206** may perform radio measurements (via antenna system **16602** and RF transceiver **16604)** on signals received from vehicle network access node **18204** and network access node **18218.** Baseband modem **16606** may then select whether to receive data from vehicle network access node **18204** or from network access node **18218** based on the radio measurements. For example, if the radio measurements indicate that the local vehicle radio network provided by vehicle network access node **18204** provides a better radio connection than the external radio network provided by network access node **18218,** baseband modem **16606** may select to receive data from vehicle network access node **18204.** Conversely, if the radio measurements indicate that the external radio network provided by network access node **18218** provides a better radio connection than the local vehicle radio network provided by vehicle network access node **18204,** baseband modem **16606** may select to receive data from network access node **18218.** In some aspects, baseband modem **16606** may select to receive data from vehicle network access node **18204** if the data is cached by vehicle network access node **18204,** and may select between vehicle network access node **18204** and network access node **18218** based on radio measurements if the data is not cached by vehicle network access node **18204.**

In some aspects, vehicle network access node **18204** may additionally provide cloud computing services to terminal devices traveling on vehicle **18202.** For example, communication module **18306** may offer cloud computing to terminal devices such as terminal device **18206.** Accordingly, if terminal device **18206** has a computationally-intensive processing task, terminal device **18206** may offload the processing task to vehicle network access node **18204** (via the local vehicle radio network). Communication module **18306** may then perform the processing task and provide the results back to terminal device **18206** (via the local vehicle radio network). Terminal device **18206** may therefore conserve battery power by offloading processing tasks to vehicle network access node **18204** for cloud computing. In some aspects, vehicle **18202** may be an autonomous vehicle that performs autonomous driving tasks at communication module **18306.** As communication module **18306** may have substantial processing power (e.g., for handling autonomous driving computations) there may be periods of time where communication module **18306** has spare computing resources that terminal devices traveling in vehicle **18202** can use for cloud computing. Additionally, in some aspects communication module **18306** may have substantial processing power in order to perform the computations involved in predicting target data. Communication module **18306** may similarly offer spare computing resources to terminal devices traveling in vehicle **18202** for cloud computing.

Vehicle **18202** is not limited to any particular type of vehicle. For example, vehicle **18202** may be a bus, a plane, an airplane, a train, a car, a boat, or any other type of terrestrial, aerial, aquatic, aerospace, or sub-aquatic vehicle. Loading area **18210** may be a bus station, a gas station, an airport, an airport gate or airport vehicle or terminal, a train station or train station platform, a garage, a carpool area, a parking lot, a dock, a stoplight, an intersection, or any other type of final or intermediary stopping point or loading point. If interface **18214** is a wired interface, vehicle **18202** may 'dock' with loading network node **18212** to complete the wired connection. If interface **18214** is a radio interface, vehicle **18202** may interface with loading network node **18212** while in range of loading network node **18212,** e.g., while in loading area **18210.**

In some aspects detailed above, vehicle network access node **18204** may provide user data to requesting terminal devices, such as video clips, movies, songs, websites, etc. Alternatively or additionally, in some aspects, vehicle network access node **18204** may take over control plane duties including procedures to maintain an external radio connection for terminal devices traveling in vehicle **18202.** For example, a terminal device traveling in vehicle **18202** such as terminal device **18206** may wish to maintain an external radio connection during travel. Terminal device **18206** may maintain an external radio connection by managing control plane duties including one or more of receiving control information from an external radio network (e.g., as provided by network access node **18218),** managing radio connectivity states (e.g., radio connected vs. radio idle), performing mobility operations such as handovers or cell selection/re-selection with the external radio network, performing radio measurements, monitoring for paging messages from the external radio network, maintaining a control-plane identity, maintaining time and/or frequency synchronization, maintaining a connection with a serving cell, etc. Accordingly, in some aspects terminal device **18206** may temporarily transfer such control plane duties to vehicle network access node **18204.** Terminal device **18206** may then conserve battery power while vehicle network access node **18204** performs the control plane duties on behalf of terminal device **18206.**

FIG. **188** shows message sequence chart **18800** illustrating an example in accordance with some aspects. As shown in FIG. **188,** terminal device **18206** may initially have a radio connection with radio access network **18828,** which may include one or more network access nodes that interface with a core network. Terminal device **18206** may enter vehicle **18202** in **18804** and connect to vehicle network access node **18204** in **18806.** In some aspects, terminal device **18206** and vehicle network access node **18204** may also exchange context information, and vehicle network access node **18204** may identify, retrieve, and cache target data based on the context information.

After connecting to vehicle network access node **18204,** terminal device **18206** may then provide a 'control plane profile' of terminal device **18206** to vehicle network access node **18204,** which may be information that uniquely identifies the terminal device for control purposes, such as a Radio Network Temporary Identifier (RNTI). In some aspects, the control plane profile may also include e.g., timing and/or frequency synchronization information, radio measurement information, current serving cell identity information, radio connectivity state, etc. Vehicle network access node **18204** may then assume responsibility for the control plane duties of terminal device **18206** and perform the control plane duties with radio access network **18828.**

In some aspects, vehicle network access node **18204** may be configured with specific components (hardware-defined and/or software-defined) to perform the control plane duties of a terminal device. For example, communication module **18306** (e.g., at physical layer module **18308** and/or control module **18310)** may be configured to control radio module **18304** and/or antenna system **18302** in accordance with the transmission and reception rules of a terminal device protocol stack. In some aspects, communication module **18306,** radio module **18304,** and antenna system **18302** may include separate components to perform network access node functionality and terminal device functionality. Accordingly, vehicle network access node **18204** may be configured to perform control plane duties for a terminal device.

Vehicle network access node **18204** may (under the control of communication module **18306)** then perform control plane duties for terminal device **18206** based on the control plane profile in **18810.** For example, vehicle network access node **18204** may perform one or more of receiving control information from radio access network **18828,** maintaining synchronization with radio access network **18828,** managing radio connectivity states (e.g., radio connected vs. radio idle), performing mobility operations such as handovers or cell selection/re-selection with radio access network **18828,** performing radio measurements, monitoring for paging messages from the radio access network **18828,** etc. In some aspects, vehicle network access node **18204** may utilize the control plane profile to seamlessly continue the radio connection with radio access network **18828.** For example, network access node **18204** may utilize one or more of control plane identity, timing and/or frequency synchronization information, radio measurement information, or current serving cell identity information of the control plane profile to continue communicating with radio access network **18828.** In some aspects, terminal device **18206** may enter a sleep or low-power state during **18810,** as vehicle network access node **18204** may have taken over radio monitoring functions as part of the control plane duties.

Terminal device **18206** may initially be connected to a first network access node of radio access network **18828,** which vehicle network access node **18204** may initially perform control plane duties with to maintain the radio connection on behalf of terminal device **18206.** As vehicle **18202** travels, vehicle network access node **18204** may move into and out of the coverage areas of different network access nodes. In accordance with the control plane duties of terminal device **18206,** vehicle network access node **18204** may perform mobility operations (e.g., handover or cell-reselection) and transfer the radio connection between the different network access nodes (e.g., based on radio measurement-triggered mobility procedures), such as from the first network access node to one or more other network access nodes of radio access network **18828.** Accordingly, vehicle network access node **18204** may perform control plane duties with one or more network access nodes of network access node **18828** depending on which network access node is serving vehicle network access node **18204** at a given point in time.

By performing control plane duties in **18810,** vehicle network access node **18204** may maintain a radio connection with radio access network **18828.** Vehicle network access node **18204** may update the control plane information based on any changes, such as changes to the control plane identity (e.g., RNTI), changes in timing and/or frequency synchronization information, updated radio measurements, changes in the current serving cell, changes the current radio connectivity state, etc. Vehicle network access node **18204** may locally store the updated control plane profile (e.g., at a local memory of communication module **18306).**

Vehicle network access node **18204** may continue performing control plane duties for terminal device **18206** in **18810.** As shown in conditional box **18812,** there may be a mobile terminating (MT) event for terminal device **18206,** which may be a voice call addressed to terminal device **18206,** a text message addressed to terminal device **18206,** downlink data addressed to terminal device **18206,** etc. Radio access network **18828** may therefore identify the pending MT event and attempt to page terminal device **18206.** Radio access network **18828** may therefore broadcast a paging message in **18814** that specifies the control plane identity (e.g., RNTI) of terminal device **18206.** Radio access network **18828** may broadcast the paging message through one or more network access nodes of radio access network **18828** that are in the vicinity of terminal device **18206** (e.g., in a tracking area (TA) last reported by vehicle network access node **18204** in a Tracking Area Update (TAU) as part of control plane duties in **18810).** As vehicle network access node **18204** may be performing control plane duties for terminal device **18206,** vehicle network access node **18204** may be monitoring for paging messages addressed to the control plane identity (e.g., RNTI) of terminal device **18206.** Vehicle network access node **18204** may therefore receive the paging message from radio access network **18828** and identify that the paging message is addressed to the control plane identity of terminal device **18206.**

Vehicle network access node **18204** may then notify terminal device **18206** of the paging message via the local vehicle radio network and provide the current control plane profile to terminal device **18206** in **18816,** which may include e.g., current timing and/or frequency synchronization information, recent radio measurements, current serving cell identity information, current radio connectivity state, information identifying the network access node of radio access network **18828** from which the paging message was received, etc. Terminal device **18206** may then use the current control plane profile provided by vehicle network access node **18204** to execute the MT event in **18818,** which may include e.g., answering/declining the voice call, receiving the text message, downloading the downlink data, etc. Terminal device **18206** may therefore utilize the external radio network provided by radio access network **18828** to execute the MT event. As terminal device **18206** may have the current control plane profile, terminal device **18206** may in some aspects be able to seamlessly (e.g., without interruption or with minimal interruption) take over the radio connection with radio access network **18828.**

Alternative to transferring the MT event to terminal device **18206** to handle via the external radio network, in some aspects vehicle network access node **18204** may handle the MT event with radio access network **18828** and route the MT event data between terminal device **18206** and radio access network **18828,** e.g., both via the local vehicle radio network between terminal device **18206** and vehicle network access node **18204** and via the external radio network between vehicle network access node **18204** and radio access network **18828.**

In some aspects, there may be a mobile originating (MO) event at terminal device **18206** as shown in conditional block **18820** of FIG. **188.** For example, a user of terminal device **18206** may trigger an MO event in **18822,** such as an outgoing voice call, an outgoing text message, outgoing uplink data (or downlink data request), etc. Vehicle network access node **18204** may then provide the current control plane profile to terminal device **18206** in **18824** via the local vehicle radio network. Terminal device **18206** may then utilize the current control plane profile to execute the MO event with radio access network **18828.** Alternatively, in some aspects vehicle network access node **18204** may execute the MO event for terminal device **18206** in **18826** and route data between terminal device **18206** and radio access network **18828** via the local vehicle radio network and the external radio network.

Accordingly, in some aspects vehicle network access node **18204** may 'act' as a terminal device and handle control plane duties for a terminal device traveling in vehicle **18202.** Upon identifying a trigger event such as an MT or MO event, vehicle network access node **18204** may transfer control plane duties back to the terminal device by providing the current control plane profile to the terminal device. In some aspects, vehicle network access node **18204** may handle control plane duties for multiple terminal devices traveling in vehicle **18202,** such as terminal devices **18206** and **18208.** In some aspects, vehicle network access node **18204** may operate similarly to a multi-SIM Dual-Sim Dual Active (DSDA) device, where vehicle network access node **18204** may act as a 'remote' second SIM (although vehicle network access node **18204** may also observe a different radio channel than terminal device **18206** due to the differences between the small 'phone' antenna of antenna system **16602** of terminal device **18206** versus the large antennas of antenna system **18302** of vehicle network access node **18204,** which may be e.g., roof-mounted).

Aspects disclosed herein may therefore provide a mechanism for a vehicle network access node to predict target data that users will request during travel on a vehicle and pre-load the target data into a storage location. The vehicle network access node may then retrieve the target data when it is requested by a terminal device during travel. The vehicle network access node may also act as a gateway for terminal devices traveling on the vehicle and may manage connections between the terminal devices and an external radio network. Some aspects disclosed herein can increase delivery speed of requested data, avoid depletion of data allowances by terminal devices, improve streaming quality, and/or conserve battery power at terminal devices.

FIG. **189** shows method **18900** of performing radio communications at a local network access node of a vehicle in accordance with some aspects. As shown in FIG. **189,** method **18900** includes receiving user context information from a terminal device **(18910).** First data is identified based on a probability indicated by the user context information that the terminal device will request the first data at a later time **(18920).** The first data is retrieved via a first internet connection of the vehicle and storing the first data **(18930).** After the first internet connection becomes unavailable at the vehicle, a request is received for the first data and the first data is provided to the terminal device **(18940).**

FIG. **190** shows method **19000** of performing radio communications at a local network access node of a vehicle in accordance with some aspects. As shown in FIG. **190,** method **19000** includes obtaining user data content preferences from a terminal device when the terminal device enters the vehicle in loading area **(19010),** predicting data, based on the user data content preferences, that the terminal device will probabilistically request at a later time to identify first data **(19020),** pre-loading the first data via a first internet connection of the vehicle available in the loading area **(19030),** and, after movement of the vehicle causes the first internet connection to become unavailable, receiving a request for the first data from the terminal device and providing the first data to the terminal device **(19040).**

## 6 Device Cooperation

The ability for terminal devices to communicate directly with each other may open numerous possibilities for device cooperation. Direct communication links such as device to device (D2D) and vehicle to vehicle (V2V) may enable exchange of important information between terminal devices and provide applications for processing offloading.

FIG. **191** shows radio communication network **19100** in accordance with some aspects, which may include terminal devices **19102** and **19104** in addition to network access nodes **19110** and **19112.** Although certain aspects of this disclosure may describe certain radio communication network setting (such as an LTE, UMTS, GSM, other 3rd Generation Partnership Project (3GPP) networks, WLAN/Wi-Fi, Bluetooth, 5G, mmWave, etc.), the subject matter detailed herein is considered demonstrative in nature and may therefore be analogously applied to any other radio communication network. The number of network access nodes and terminal devices in radio communication network **19100** is exemplary and is scalable to any amount. These aspects, e.g., device cooperation, direct communication links (e.g., D2D, V2V, etc.), etc., may be used with common channel aspects, e.g., a common channel instrumental in dynamically coordinating direct device to device communication links and device to radio access node communication links, or may be used with power efficiency aspects, e.g., selecting the type of link according to device or network power efficiency levels, or may be used with enhanced communication aspects, e.g., selecting the type of link according to radio environment map (REM) information.

Accordingly, in an exemplary cellular setting network access nodes **19110** and **19112** may be base stations (e.g., eNodeBs, NodeBs, Base Transceiver Stations (BTSs), etc.) while terminal devices **19102** and **19104** may be cellular terminal devices (e.g., Mobile Stations (MSs), User Equipments (UEs), etc.). Network access nodes **19110** and **19112** may therefore interface (e.g., via backhaul interfaces) with a cellular core network such as an Evolved Packet Core (EPC, for LTE), Core Network (CN, for UMTS), or other cellular core network, which may also be considered part of radio communication network **19100.** The cellular core network may interface with one or more external data networks. In an exemplary short-range setting, network access node **19110** and **19112** may be access points (APs, e.g., WLAN or Wi-Fi APs) while terminal device **19102** and **19104** may be short range terminal devices (e.g., stations (STAs)). Network access nodes **19110** and **19112** may interface (e.g., via an internal or external router) with one or more external data networks.

Network access nodes **19110** and **19112** (and other network access nodes of radio communication network **19100** not explicitly shown in FIG. **191)** may accordingly provide a radio access network to terminal devices **19102** and **19104** (and other terminal devices of radio communication network **19100** not explicitly shown in FIG. **191).** In an exemplary cellular setting, the radio access network provided by network access nodes **19110** and **19112** may enable terminal devices **19102** and **19104** to wirelessly access the core network via radio communications. The core network may provide switching, routing, and transmit for traffic data related to terminal devices **19102** and **19104** and may provide access to various internal (e.g., control nodes, other terminal devices on radio communication network **19100,** etc.) and external data networks (e.g., data networks providing voice, text, multimedia (audio, video, image), and other Internet and application data). In an exemplary short-range setting, the radio access network provided by network access nodes **19110** and **19112** may provide access to internal (e.g., other terminal devices connected to radio communication network **19100)** and external data networks (e.g., data networks providing voice, text, multimedia (audio, video, image), and other Internet and application data). Network access nodes **19110** and **19112** may be network access nodes for any other type of radio access technology and analogously provide a radio access network to proximate terminal devices in this manner.

The radio access network and core network (if applicable) of radio communication network **19100** may be governed by network protocols that may vary depending on the specifics of radio communication network **19100.** Such network protocols may define the scheduling, formatting, and routing of both user and control data traffic through radio communication network **19100,** which includes the transmission and reception of such data through both the radio access and core network domains of radio communication network **19100.** Accordingly, terminal devices **19102** and **19104** and network access nodes **19110** and **19112** may follow the defined network protocols to transmit and receive data over the radio access network domain of radio communication network **19100** while the core network may follow the defined network protocols to route data within and outside of the core network. Exemplary network protocols include LTE, UMTS, GSM, WiMAX, Bluetooth, Wi-Fi, mmWave, etc., any of which may be applicable to radio communication network **19100.**

FIG. **192** shows an internal configuration of terminal device **19102,** which may include antenna system **19202,** radio frequency (RF) transceiver **19204,** baseband modem **19206** (including physical layer processing module **19208** and controller **19210),** application processor **19212,** memory **19214,** power supply **19216,** sensor **19218,** and sensor **19220.** Although not explicitly shown in FIG. **192,** terminal device **19102** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output devices (display(s), keypad(s), touchscreen(s), speaker(s), external button(s), camera(s), microphone(s), etc.), etc.

In an abridged operational overview, terminal device **19102** may transmit and receive radio signals on one or more radio access networks. Baseband modem **19206** may direct such communication functionality of terminal device **19102** according to the communication protocols associated with each radio access network, and may execute control over antenna system **19202** and RF transceiver **19204** in order to transmit and receive radio signals according to the formatting and scheduling parameters defined by each communication protocol. Although various practical designs may include separate communication components for each supported radio access technology (e.g., a separate antenna, RF transceiver, physical layer processing module, and controller), for purposes of conciseness the configuration of terminal device **19102** shown in FIG. **192** depicts only a single instance of each such components.

Terminal device **19102** may transmit and receive radio signals with antenna system **19202,** which may be a single antenna or an antenna array that includes multiple antennas and may additionally include analog antenna combination and/or beamforming circuitry. In the receive path (RX), RF transceiver **19204** may receive analog radio frequency signals from antenna system **19202** and perform analog and digital RF front-end processing on the analog radio frequency signals to produce digital baseband samples (e.g., In-Phase/Quadrature (IQ) samples) to provide to baseband modem **19206.** RF transceiver **19204** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **19204** may receive digital baseband samples from baseband modem **19206** and perform analog and digital RF front-end processing on the digital baseband samples to produce analog radio frequency signals to provide to antenna system **19202** for wireless transmission. RF transceiver **19204** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **19206** to produce the analog radio frequency signals for wireless transmission by antenna system **19202.** Baseband modem **19206** may control the RF transmission and reception of RF transceiver **19204,** including specifying the transmit and receive radio frequencies for operation of RF transceiver **19204.**

As shown in FIG. **192,** baseband modem **19206** may include physical layer processing module **19208,** which may perform physical layer (PHY, Layer 1) transmission and reception processing to prepare outgoing transmit data provided by controller **19210** for transmission via RF transceiver **19204** and prepare incoming received data provided by RF transceiver **19204** for processing by controller **19210.** Physical layer processing module **19210** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Physical layer processing module **19208** may be structurally realized as a hardware-defined module, e.g., as one or more dedicated hardware circuits or FPGAs, as a software-defined module, e.g., one or more processors configured to execute program code defining arithmetic, control, and I/O instructions (e.g., software and/or firmware) stored in a non-transitory computer-readable storage medium, or as a mixed hardware-defined and software-defined module. Although not explicitly shown in FIG. **192,** physical layer processing module **19208** may include a physical layer controller configured to control the various hardware and software processing components of physical layer processing module **19208** in accordance with physical layer control logic defined by the communications protocol for the relevant radio access technologies. Furthermore, while physical layer processing module **19208** is depicted as a single component in FIG. **192,** physical layer processing module **19208** may be collectively implemented as separate sections of physical layer processing components where each respective section is dedicated to, for example, the physical layer processing of a particular radio access technology.

Terminal device **19102** may be configured to operate according to one or more radio access technologies, which may be directed by controller **19210.** Controller **19210** may thus be responsible for controlling the radio communication components of terminal device **19102** (antenna system **19202,** RF transceiver **19204,** and physical layer processing module **19208)** in accordance with the communication protocols of each supported radio access technology, and accordingly may represent the Access Stratum and Non-Access Stratum (NAS) (also encompassing Layer 2 and Layer 3) of each supported radio access technology. Controller **19210** may be structurally embodied as a protocol processor configured to execute protocol software (retrieved from a controller memory) and subsequently control the radio communication components of terminal device **19102** in order to transmit and receive communication signals in accordance with the corresponding protocol control logic defined in the protocol software.

Controller **19210** may therefore be configured to manage the radio communication functionality of terminal device **19102** in order to communicate with the various radio and core network components of radio communication network **19100,** and accordingly may be configured according to the communication protocols for multiple radio access technologies. Controller **19210** may either be a unified controller that is collectively responsible for all supported radio access technologies or may include multiple separate controllers where each controller is a dedicated controller for a particular radio access technology or group of technologies, such as a dedicated controller for a first radio access technology and a dedicated controller for a second radio access technology. Regardless, controller **19210** may be responsible for directing radio communication activity of terminal device **19102** according to the communication protocols of the supported RATs. As previously noted regarding physical layer processing module **19208,** one or both of antenna system **19202** and RF transceiver **19204** may similarly be partitioned into multiple dedicated components that each respectively correspond to one or more of the supported radio access technologies. Depending on the specifics of each such configuration and the number of supported radio access technologies, controller **19210** may be configured to control the radio communication operations of terminal device **19102** in accordance with, e.g., a master/slave RAT hierarchical or multi-SIM scheme.

Terminal device **19102** may also include application processor **19212,** memory **19214,** and power supply **19212.** Application processor **19212** may be a CPU configured to execute various applications and/or programs of terminal device **19102** at an application layer of terminal device **19102,** such as an operating system (OS), a user interface (UI) for supporting user interaction with terminal device **19102,** and/or various user applications. The application processor may interface with baseband modem **19206** as an application layer to transmit and receive user data such as voice data, audio/video/image data, messaging data, application data, basic Internet/web access data, etc., over the radio network connection(s) provided by baseband modem **19206.**

Memory **19214** may embody a memory component of terminal device **19102,** such as a hard drive or another such permanent memory device. Although not explicitly depicted in FIG. **192,** the various other components of terminal device **19102** shown in FIG. **192** may additionally each include integrated permanent and non-permanent memory components, such as for storing software program code, buffering data, etc.

Power supply **19216** may be an electrical power source that provides power to the various electrical components of terminal device **19102.** Depending on the design of terminal device **19102,** power supply **19216** may be a 'definite' power source such as a battery (rechargeable or disposable) or an 'indefinite' power source such as a wired electrical connection. Operation of the various components of terminal device **19102** may thus pull electrical power from power supply **19216.**

Sensors **19218** and **19220** may be sensors that provide sensor data to application processor **19212.** Sensors **19218** and **19220** may be any of a location sensor (e.g., a global navigation satellite system (GNSS) such as a Global Positioning System (GPS)), a time sensor (e.g., a clock), an acceleration sensor/gyroscope, a radar sensor, a light sensor, an image sensor (e.g., a camera), a sonar sensor, etc.

In accordance with some radio communication networks, terminal devices **19102** and **19104** may execute mobility procedures to connect to, disconnect from, and switch between available network access nodes of the radio access network of radio communication network **19100.** As each network access node of radio communication network **19100** may have a specific coverage area, terminal devices **19102** and **19104** may be configured to select and re-select between the available network access nodes in order to maintain a strong radio access connection with the radio access network of radio communication network **19100.** For example, terminal device **19102** may establish a radio access connection with network access node **19110** while terminal device **19104** may establish a radio access connection with network access node **19112.** In the event that the current radio access connection degrades, terminal devices **19102** or **19104** may seek a new radio access connection with another network access node of radio communication network **19100;** for example, terminal device **19104** may move from the coverage area of network access node **19112** into the coverage area of network access node **19110.** As a result, the radio access connection with network access node **19112** may degrade, which terminal device **19104** may detect via radio measurements such as signal strength or signal quality measurements of network access node **19112.** Depending on the mobility procedures defined in the appropriate network protocols for radio communication network **19100,** terminal device **19104** may seek a new radio access connection (which may be, for example, triggered at terminal device **19104** or by the radio access network), such as by performing radio measurements on neighboring network access nodes to determine whether any neighboring network access nodes can provide a suitable radio access connection. As terminal device **19104** may have moved into the coverage area of network access node **19110,** terminal device **19104** may identify network access node **19110** (which may be selected by terminal device **19104** or selected by the radio access network) and transfer to a new radio access connection with network access node **19110.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

FIG. **193** shows an internal configuration of a network access node such as network access node **19110,** which may be configured to execute method **20100.** As shown in FIG. **193,** network access node **19110** may include antenna system **19302,** radio module **19304,** and communication module **19306** (including physical layer module **19308** and control module **310310).** In an abridged overview of the operation of network access node **19110,** network access node **19110** may transmit and receive radio signals via antenna system **19302,** which may be an antenna array that includes multiple antennas. Radio module **19304** may perform transmit and receive RF processing in order to convert outgoing digital data from communication module **19306** into analog RF signals to provide to antenna system **19302** for radio transmission and to convert incoming analog RF signals received from antenna system **19302** into digital data to provide to communication module **19306.** Physical layer module **19308** may be configured to perform transmit and receive PHY processing on digital data received from radio module **19304** to provide to control module **19110** and on digital data received from control module **19310** to provide to radio module **19304.** Control module **19310** may control the communication functionality of network access node **19110** according to the corresponding radio access protocols, e.g., LTE, which may include exercising control over antenna system **19302,** radio module **19304,** and physical layer module **19308.** Each of radio module **19304,** physical layer module **19308,** and control module **19310** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. In some aspects, radio module **19304** may be a software-defined radio (SDR) component implemented as a processor configured to execute software-defined instructions that specify radio frequency processing routines. In some aspects, physical layer module **19308** may include a processor and one or more hardware accelerators, wherein the processor is configured to control physical layer processing and offload certain processing tasks to the one or more hardware accelerators. In some aspects, control module **19310** may be a controller configured to execute software-defined instructions that specify upper-layer control functions. In some aspects, control module **19310** may be limited to radio communication protocol stack layer functions, while in other aspects control module **19310** may also be responsible for transport, internet, and application layer functions. Network access node **19110** may interface with a core network and/or internet networks (directly/via a router or via the core network), which may be through a wired or wireless interface. Network access node **19110** may also interface with other network access nodes over a wired or wireless (e.g., microwave radio or other wireless transceiver system) interface. Network access node **19110** may thus provide the functionality of network access nodes in radio communication networks by providing a radio access network to enable served terminal devices to access desired communication data.

Radio communication networks may be highly dynamic due to a variety of factors that impact radio communications. For example, terminal devices **19102** and **19104** may move (e.g., transported by a user) to various different positions relative to network access nodes **19110** and **19112,** which may affect the relative distances and radio propagation channels between terminal devices **19102** and **19104** and network access node **19110** and **19112.** The radio propagation channels may also vary due to factors unrelated to mobility such as interference, moving obstacles, and atmospheric changes. Additionally, local conditions at terminal device **19102** and **19104,** such as battery power, the use of multiple radio access technologies, varying user activity and associated data traffic demands, etc., may also impact radio communication. Radio communications may also be affected by conditions at network access nodes **19110** and **19112** in addition to the underlying core network, such as network load and available radio resources.

The radio communication environment between terminal devices **19102** and **19104** and network access nodes **19110** and **19112** may thus be in a constant state of flux. In order to operate effectively and enhance user experience, terminal devices **19102** and **19104** and network access nodes **19110** and **19112** may need to recognize such changes and adapt operation accordingly.

Radio communication systems may therefore utilize device cooperation between terminal devices **19102** and **19104,** in which the terminal devices (and, in some cases, network access points **19110** and **19112)** may coordinate the distribution, computation, and communication of information in order to meet effectively implement autonomous systems which satisfy stringent latency requirements.

6.1 Device Cooperation #1

In some aspects of this disclosure, a terminal device may utilize device cooperation to develop a framework for distributed computation over wireless networks. In particular, the framework developed in an aspect of this disclosure may, for example, account for link quality, computational ability of terminal devices within the network as well as opportunity for simultaneous improvement or reduction or optimization of computation and communication tasks. Additional examples of device cooperation may include, sharing of local radio conditions to collectively determine a map of radio conditions in the neighborhood. Further, examples include, exploiting and sharing any local shared content across devices in the local neighborhood. The device cooperation methods and devices in this aspect of the disclosure may be implemented, for example, in autonomous systems (e.g., automated vehicles, drones, robots, etc.).

A collection of cooperating devices, may provide opportunities for collective or distributed computation across nodes. Especially, a distributed computation framework for wireless systems may be enabled for automated applications such as those with real-time constraints which may not be met with cloud offloading or augmented cloud offload (e.g., where some computations are performed locally by a vehicle and other computations are performed at an external network cloud, such as where certain computations can be pseudo-real-time). These applications can include automated vehicles, especially those moving in platoons or convoys, multiple agent robotics, a swarm of drones, or even road-side units that comprise fixed infrastructure nodes, that can cooperate via wireless mesh networking for local and timely computation, rather than offloading processing to the cloud, etc.

Autonomous systems can sense, learn, and/or act in real-time to complete time critical tasks. In the case of autonomous driving, for example, vehicles (cars, drones, etc.) information may need to be processed in real-time for dynamic collision avoidance. In this scenario, there may be sufficient storage and compute power within the vehicles and/or surrounding infrastructure that distributed computation at the edge may be used to meet real-time latency constraints (5-10 ms) of the End-to-End (E2E) processing (e.g., scene reconstruction from locally captured images). Cloud computing may not be able to meet these constraints without significant investments in infrastructure. Devices and methods in the disclosure present techniques which may be distributed locally since infrastructure support may be unavailable.

FIG. **194** shows a vehicular ad hoc network (VANET) **19400** configured with a computation distribution framework in accordance with some aspects. It is appreciated that VANET **19400** is exemplary in nature and may thus be simplified for purposes of this explanation.

One or more of vehicular terminal devices **19402-19406** and **19412-19416** may include the internal configuration of terminal device **19102** as shown in FIG. **192** as a communication system, and accordingly may include a modem (e.g., baseband modem **1920**6) that transmits and receives data as radio signals via an RF transceiver (e.g., RF transceiver **19204)** and antenna system (e.g., antenna system **19202)** in the manner detailed above for terminal device **19102.** In some aspects, one or more of vehicular terminal devices **19402-19406** and **19412-19416** may also include a processing platform for performing distributed computations, which may be implemented as an application-layer component (e.g., at application processor **19212)** or a modem-layer component (e.g., at baseband modem **19206).**

Vehicular terminal devices **19402-19406** and **19412-19416** can also include one or more of a vehicle frame and housing, windows and doors, an engine, a steering and movement system (e.g., terrestrial in the form of wheels or tracks, aerial in the form of rotors, propellers, or jet engines, or another vehicular movement system), and associated control electronics. In some aspects, vehicular terminal devices **19402-19406** and **19412-19416** may be autonomous vehicles. In some aspects, vehicular terminal devices **19402-19406** and **19412-19416** may not be autonomous, and may be controlled (either locally or remotely) by a driver.

One or more of roadside network access nodes **19420** and **19430** may be configured with an internal configuration in the manner of network access node **19110** shown in FIG. **193,** and accordingly may include a communication module (e.g., communication module **19306**) that transmits and receives data as radio signals via a radio module (e.g., radio module **19304**) and antenna system (e.g., antenna system **19302)** in the manner detailed above for network access node **19110.** In some aspects, one or more of roadside network access nodes **19420** and **19430** may also include a processing platform for performing distributed computations, which may be implemented as a modem-layer or application-layer component of communication module **19306.** Roadside network access nodes **19420** and **19430** can be Roadside Units (RSUs) or a similarly type of network access node positioned to service passing vehicles.

Vehicular terminal devices **19402-19406** and **19412-19416** within VANET **19400** are equipped with radio access technology, such as a cellular or short-range radio access technology e.g., LTE, mmWave, 5G, WiMax, Wi-Fi, Bluetooth, etc. Communication in these networks may be vehicle-to-vehicle (V2V), where the vehicles communicate directly with each other; vehicle-to-infrastructure (V2I), where the vehicles communicate with an RSU, base station, or any other radio access infrastructure; or vehicle-to-network (V2N), where the vehicles communicate with core or internet network components via end-to-end connections.

Roadside network access nodes **19420** and **19430** may be installed to provide infrastructure support by limiting the communication and dissemination of information to a confined area, resulting in smaller message delay. In this manner, roadside network access nodes **19420** and **19430** function as local stations capable of coordinating communication with vehicles within their range and also act as an interface with the overall network, for example, an underlying core network and/or external cloud or internet networks. Roadside network access nodes **19420** and **19430** are configured to disseminate information obtained from vehicular terminal devices **19402-19406** and **19412-19416** in scenarios such as those involving stringent latency requirements, high mobility, and constantly changing environments. Roadside network access nodes **19420** and **19430** may be available and configured to adapt depending on different scenarios, e.g., high speed traffic on a high-way vs. rush-hour traffic in a city. Roadside network access nodes **19420** and **19430** may be configured to receive reports from vehicular terminal devices **19402-19406** and **19412-19416** and distribute the computation of information obtained from these reports to the vehicles based on wireless link quality and a particular vehicle's computational ability.

In some aspects, roadside network access nodes **19420** and **19430** may further be configured to transmit/broadcast information regarding characteristics of each of their respective areas to any passing vehicles. For example, roadside network access node **19420** may broadcast information regarding turns in road **19450,** objects (e.g., trees, bridges, signs, etc.) along road **19450** so that passing vehicular terminal devices **19402-19406** do not have to perform computations on this information and may supplement their own locally gathered information and computations with the information from roadside network access node **19420.**

However, in certain scenarios, roadside network access nodes **19420** and **19430** may not be available to coordinate the communication between the vehicles. In this case, the vehicles themselves may be configured to distribute the computations needed for autonomous driving amongst themselves. In this case, a vehicle can be identified as the anchor control node responsible for orchestrating the data collection and distribution of the computations. In some aspects, this vehicle may be assigned on the basis of being the most powerful 'node' (in terms of, e.g., computational ability and/or wireless link quality), on the basis of geographic location (e.g., the most centrally located vehicle), and/or on a random or other basis.

Self-driving cars may generate upwards of 1 Gbps of data from sensors, cameras, etc. The latency requirement in some cases for enabling control decisions from such data is can be in the range of milliseconds (e.g., 5 to 10 ms).). In some cases, the latency requirement may be more stringent and may, for example, be less than 5 ms and/or even less than 1 ms (e.g., in the order of tens of microseconds), and in some cases the latency requirement may be less stringent, and may, for example, be greater than 10 ms. In order for the car to make decisions in a timely manner, the communication and processing delays should be within the tolerance limits. The latency requirement also depends on the control action, and for such actions that are time-critical for navigation, executing these actions within the latency requirement is important. Furthermore, for actions such as platooning, e.g., smart coordination between a set of vehicles, the latency requirements may be even more stringent.

In the case of platooning, where a roadside network access node is available, the roadside network access node may need to know the relative positions of the cars and be aware of the overall environment. This data gathering may require fusing some or all the sensor inputs from different vehicles (e.g., camera inputs for joint scene reconstruction). Such a task may not be computationally feasible in a single vehicle.

Furthermore, having a centralized computation of all the data (e.g., at a roadside network access node) at an RSU) may impose a heavy load on the communication channels. By implementing the programing models of this disclosure, the computations of portions of the data may be calculated at different vehicles, thereby improving, or in some cases optimizing, communication of the overall set of data in order to better meet the latency requirements. These computations of data may include, for example, the location and orientations of the vehicles, a subset of features extracted from the images captured from vehicle cameras, the camera parameters for each vehicle, and/or distance estimates to adjacent vehicles based on radar sensors.

A similar framework may be implemented for the coordinated movement of drones, for example. In this scenario, there may not be a coordinating network access node, so one drone may act as the hub and distribute the computation across other drones for path planning. In the performance of cooperative tasks amongst drones (e.g., lifting and transporting heavy payloads), heavy computations may be performed to determine the actions of each of the drones. While some aspects assume a centralized server and processing where the drones may transmit and receive data remotely, distributed implementations may be preferable and applicable in certain scenarios, e.g., in rural areas, wilderness, etc. Such high-level coordination distributes the computation load across the drones while communicating the load in a manner that satisfies the latency requirements.

The programming models disclosed herein may account for wireless constraints in distributing, computing, and communicating the necessary data in scenarios such as those which have been described. The models of this disclosure may be leveraged to apply techniques that provide improved compute-communication trade-offs. The use of technology described herein is generally applicable across alternate mobile edge computing scenarios and may work across different radio access technologies used in the implementation of wireless links.

In an aspect of this disclosure, the devices within a wireless network (e.g., autonomous cars communicating with each other) are configured to compute and communicate information to satisfy the latency requirements by exploiting a distributed computation model that may be based on a MapReduce programming model, taking into account wireless link quality and individual device (e.g., vehicle) computational ability.

FIG. **195** shows a computation distribution framework **19500** which may be implemented in a wireless network in accordance with some aspects. It is appreciated that framework **19500** is exemplary in nature and may thus be simplified for purposes of this explanation.

Framework **19500** is a high-level illustration of a MapReduce framework, wherein each of devices A, B, and C may represent, for example, processing units located within separate vehicular terminal devices, such as vehicular terminal devices **19402-19406** and **19412-19416.** As previously indicated, in some aspects one or more of vehicular terminal devices **19402-19406** and **19412-19416** may be equipped with a processing platform for performing distributed computations (e.g., as a modem-layer or application-layer component), which may correspond to Device A, B, and C.

Each of Devices A, B, and C may be assigned a subset of inputs to map, e.g., Device A may be assigned input files 1 and 2, Device B may be assigned input files 3 and 4, and Device C may be assigned input files 5 and 6 (for example these files may represent information related to different local areas)For example, each of these input files may include information such as vehicular location, orientation, and travel velocity information, images captured by cameras in the vehicles, distance estimates based on radar sensors, etc.,., for geographically separated regions of a given area of interest. Devices A, B, and C may, for example, then perform a mapping task on the assigned inputs, such as count vehicles that exceed the set speed limit, or identify vehicles that are proximal to each other, or that are passing an intersection. The outputs of these partial computation/mapping may then need to be shuffled between the devices, to perform a reduce task to collate the results of the different map tasks.

In a simplified example of a MapReduce computation, framework **19500** will be assigned the task of counting the occurrence of words (Word A, Word B and Word C) in a given text file. However, such a framework may be applied to provide computation, for example, to perform a scene reconstruction from data captured from one or more vehicles, the data including at least one of radar sensor information, images captured from cameras, vehicular location, orientation, and/or travel velocity information.

In framework **19500,** the text file is split into 6 sub-files. For purposes of applying such a framework **19500** to autonomous driving, for example, the sub-files may contain information such as vehicle velocity, radar sensor information etc. Each sub-file may contain this information for a different geographical neighborhood. Devices A, B, and C are assigned two of these sub-files each (device A is assigned sub-files 1 and 2, device B is assigned sub-files 3 and 4, device C is assigned sub-files 5 and 6). The distribution of word counting tasks across different devices is referred to as the mapping phase, where each of Devices A, B, and C will perform a respective iteration of a map task on the assigned inputs. Here, each device will count the occurrence of Words A, B, and C in the two sub-files it has been assigned as the map task.

In order for each of Devices A, B, and C to obtain the final count results for each of Words A, B, and C, Device A delivers the total count of Word A by collecting not only its own computation of Word A in sub-files 1 and 2, but also collecting the count of Word A in sub-files 3 and 4 from Device B and the count of Word A in sub-files 5 and 6 from Device C. Similarly, Device B delivers the total count of Word B and Device C delivers the count of Word C. Accordingly, the MapReduce computation includes shuffling phase **19510** which may be performed to collate the results of the interim computations. In the word count example, each of Devices A, B and C collects the results of four additional computations. Devices A, B, and C may then perform a respective iteration of the reduce task, using the map task output obtained locally (e.g., the count of Word A in sub-files 1 and 2) and the map task outputs obtained via the data shuffling, to deliver the final results of occurrence of each word.

MapReduce can therefore provide a framework for vehicular terminal devices to perform distributed computation tasks, for example, those related to vehicular movement, such as driving scene reconstructions, collision avoidance decisions, or autonomous driving decisions. For example, vehicular terminal devices **19402-19406** can each obtain sensor data for their respective local surrounding areas (e.g., image data, video data, sonar data, positioning data, movement (direction or velocity) data, and/or radar data), which may be analogous to the distribution of input files in the example above. Further, an anchor control node can provide sensor data to vehicular terminal devices **19402-19406** for analysis, similarly analogous to the distribution of input files. Each of vehicular terminal devices **19402-19406** may then process the local sensor data as their respective iterations of the mapping task (e.g., a distributed mapping processing task) to obtain respective mapping task results (e.g., intermediate distributed processing results). Vehicular terminal devices **19402-19406** may then shuffle the mapping task results according to the shuffling scheme (e.g., a distributed processing shuffling scheme) such that vehicular terminal devices **19402-19406** receive the mapping task results for performing their respective iterations of the reduce tasks. Vehicular terminal devices **19402-19406** may then perform their respective iteration of the reduce task on their own mapping task results and on the mapping task results received from other of vehicular terminal devices **19402-19406** during the shuffling phase. Vehicular terminal devices **19402-19406** may then obtain the final results (e.g., final distributed processing results) at the reduce task results. Vehicular terminal devices **19402-19406** may then use the reduce task results to influence or perform vehicular movement, such as for autonomous driving.

In some aspects, vehicular terminal devices **19402-19406** may execute the distributed computation task under the coordination of an anchor control node, which may be one of vehicular terminal devices **19402-19406** that is assigned or selected as an anchor control node, another vehicular terminal device that is designated as an anchor control node, or a network access node such as a roadside network access node that is acting as an anchor control node. The anchor control node may be responsible for one or more of assigning input data for mapping tasks, specifying the shuffling scheme, executing the shuffling scheme, and coordinating final results if necessary. For example, in some aspects, the anchor control node may collect the input data (for example, sensor data provided by vehicular terminal devices **19402-19406)** and provide the input data to vehicular terminal devices **19402-19406** as input for their respective mapping tasks. In some aspects, the anchor control node may broadcast or multicast the input data, using downlink broadcast/multicast if the anchor control node is a network access node or a D2D/V2V broadcast/multicast (e.g., Anycast) if the anchor control node is a vehicular terminal device. In some aspects, the anchor control node may also collect mapping task results from vehicular terminal devices **19402-19406** and redistribute the mapping task results according to the shuffling scheme of the Shuffling phase. In some aspects, the anchor control node may similarly use broadcast or multicast techniques during the shuffling phase to provide the mapping task results to the appropriate vehicular terminal devices **19402-19406** for their respective reduce tasks. In some aspects, the anchor control node may provide the shuffling scheme (e.g., identify the destination vehicular terminal device for a vehicular terminal device to send its mapping task results to and identify the source vehicular terminal device for a vehicular terminal device to receive mapping task results from), which the vehicular terminal devices may execute using e.g., D2D/V2V unicast transmissions.

In some aspects, vehicular terminal devices **19402-19406** may perform the distributed computation task without an anchor control node, and may coordinate with each other to distribute the input data and determine and execute the shuffling scheme (e.g., using D2D/V2V broadcast/multicast or unicast).

While MapReduce may provide a mechanism for vehicular terminal devices to efficiently perform distributed computation tasks, there may be a bottleneck when distributing the work load across different vehicular terminal devices due, for example, to the cost of the shuffling phase, especially when the communication is performed over wireless links.

For example, in some data center settings, 30-70% of execution time is spent in the Shuffling phase, providing mapping task results to the appropriate vehicular terminal devices for use in their respective reducing tasks. For example, if a large group of vehicular terminal devices are arranged to exchange mapping task results with all or almost all of the other vehicular terminal devices of the group during the Shuffling phase, the Shuffling phase may occupy a substantial bandwidth and/or take significant time to complete. Therefore, it may important to improve, or in some cases to optimize, framework **19500** to improve the time spent in communication of data shuffling, especially in autonomous system scenarios where latency requirements are exceedingly stringent.

FIG. **196** shows a modified framework **19600** implemented into a wireless network in accordance with some aspects. It is appreciated that framework **19600** is exemplary in nature and may thus be simplified for purposes of this explanation.

Framework **19600** is a high-level illustration of a coded MapReduce framework configure to apply network coding principles to distribute the computation tasks across the nodes (for example, terminal devices or vehicles) so that multicasting opportunities are created to reduce the amount of communication needed in the Shuffling phase. In some aspects, framework **19600** can achieve an optimal compute versus communication tradeoff in that as the computation per node increase, the communication load decreases sub-linearly. Framework **19600** illustrates that by increasing the computation load per device, coded multicast opportunities are created in each transmission in the data shuffling, providing the necessary input for two devices. In framework **19600**, for example, device A maps the values of sub-files 5 and 6; device B maps the values of sub-files 1 and 2; and device C maps the values of sub-files 3 and 4. Only one coded transmission is used by each device to recover the values it uses: device A transmits a coded communication with sub-files 1 and 2; device B with sub-files 5 and 4; and device C with sub-files 2 and 6. For example, device A can derive the value of sub-file 5 from the transmission from device B as device A already knows the value for sub-file 4, and so on.

mapping framework **19600** to the word count example from FIG. **195**, each device doubles its computational load by processing four sub-files instead of two, e.g., device A searches for Words A, B, and C in sub-files 1, 2, 3, and 4; device B processes sub-files 3, 4, 5, and 6; and device C processes sub-files 5, 6, 1, and 2. While the computational load increase may not be desirable in some cases, repetitive computation can significantly reduce data transfer during the Shuffling phase, as, for example, device A only needs the values from sub-files 5 and 6, device B from sub-files 1 and 2, and device C from sub-files 3 and 4.

In the coded Shuffling phase **19610**, Device A can send an XOR of results from sub-files 1 and 3, from which Device B can recover the results of sub-file 1 (since it already knows the results from sub-file 3, which it computed) and Device C can recover the results of sub-file 3 (since it already knows the results from sub-file 1, which it computed). Similarly, Device B can send an XOR message with the results from sub-files 5 and 4 to allow Device A to recover the results of sub-file 5 and Device C to recover the results of sub-file 4; and Device C can send an XOR message with the results from sub-file 2 and 6 to allow Device A to recovers the results of sub-file 6 and Device B to recover the results from of sub-file 2.

In some cases, by increasing the computation load of each device, only two additional values per device are used in the reduce phase (e.g., 2x3= 6 messages, resulting in a two times reduction in communication load). The coding process can allow for a further two times reduction, since, in this example, only three message (each of the XOR messages) are required instead of six.

Therefore, in this example, in framework **19600**, only one coded transmission is needed from each device, and this coded transmission is useful for two other devices. Framework **19600** may be generalized to several other applications based off of MapReduce frameworks. For example, an image captured by a vehicular camera may be analyzed for the presence of several target objects. The image may then be segmented for analysis across different nodes, such that each of the nodes (e.g., vehicles) may give overlapping segments. Each node then scans for the presence of the targeted features within the assigned segments as their respective mapping tasks and shuffles the mapping task results during the Shuffling phase. In the reduce phase, the combiner nodes may then collate the partial results for each target object across some or all of the segments. By suitably encoding the outputs of the mapping task phase, the overall communication load of the Shuffling phase may be reduced.

In frameworks **19500** and **19600**, the execution of the structured mapping phase is carried out through the use of a centralized server which assigns the partitioning of the data set and the mapping, encoding, and reduce phase operations. In another aspect of this disclosure, each node (e.g., terminal device, vehicle, etc.) may also randomly cache the dataset with a known redundancy and compute the assigned tasks on the locally stored dataset. Each node may then also encode the results across the datasets and broadcast the encoded results to be used for the reduce phase. The encoding may be based on knowledge of the datasets at adjacent nodes. Such knowledge may be discovered through an out-of-band channel or through the help of the assigned anchor control node. The exact encoding details may then be pre-pended to the broadcast data as meta-data. The nodes collating the results of the distributed computation may then decode this transmission by decoding the meta-data. It is assumed that the overhead of adding meta-data and the required control coordination is negligible compared to the size of the data being exchanged.

In some aspects, the vehicular terminal devices of the autonomous network can communicate with each other via a central server, for example, network access node **19420** and/or **19430** of FIG. **194**, or an access point, eNB, or another type of network access node that acts as a central coordinator, or 'anchor control node', for the Shuffling phase. In this scenario, each of the nodes (e.g., vehicular terminal devices **19402-19406)** may send their coded output (coded mapping task results) to the anchor control node, e.g., vehicular network access node **19420**, which then broadcasts the coded outputs to some or all of the vehicles using a multicast or broadcast framework for the Shuffling phase, such as the evolved Multimedia Broadcast/Multimedia Service (eMBMS) interface of an LTE network or another type of multicast or broadcast framework. Alternatively, for the Shuffling phase, device to device (D2D/V2V communications may be used to exchange information directly between nodes. By employing D2D/V2V, nodes within the network may be configured to communicate directly with each other, either on a node-to-node basis or on a node-to-multiple node (e.g., multicast) basis. Accordingly, in some aspects, the vehicular terminal devices can execute the Shuffling phase by using unicast D2D/V2V to directly transmit the coded mapping task results to the destination vehicular terminal devices (according to the shuffling scheme). In some aspects, an anchor control node of the vehicular terminal devices may collect the mapping task results from the other vehicular terminal devices (e.g., with D2D/V2V) and then distribute the mapping task results to the appropriate vehicular terminal devices according to the shuffling scheme. Additionally or alternatively, in some aspects, the vehicular terminal devices can execute the Shuffling phase using multicast D2D/V2V by multicasting the mapping task results to the other vehicular terminal devices.

In some aspects, vehicular terminal devices such as any of vehicular terminal devices **19402-19406**, **19412-19416**, or **19732-19736** may be configured to decide whether to offload a processing task. In other words, a vehicular terminal device may decide whether to offload the processing task to be processed in a distributed manner according to these aspects or to perform processing task locally without offloading. For example, a vehicular terminal device may identify a processing task that and decide whether or not to offload the processing task based on certain situational criteria such as, without limitation, a computational load of the processing task, a latency constraint of the processing task, an available bandwidth, a current level of network congestion, a number of proximate vehicular terminal devices that are available for offloading, or a link quality of vehicular links and/or infrastructure links.

Accordingly, a vehicular terminal device may evaluate one or more of such factors to decide whether to offload the processing task. Scenarios that may shift the decision toward offloading can be a large computational load of the processing task, a relaxed latency constraint (e.g., if the processing task is not realtime and/or has a larger latency tolerance), a large available bandwidth, a low current level of network congestion, a large number of proximate vehicular terminal devices, and strong link qualities of vehicular and/or infrastructure links. The vehicular terminal device may then either perform the processing task locally without offloading or may offload the processing task based on the evaluation of one or more of these factors. In an exemplary scenario, a vehicular terminal device may determine that the network congestion is high and the latency constraint of the processing task may not be met if offloading is utilized. The vehicular terminal device may then decide against offloading and consequently perform the processing task locally

Other variations related to the degree of offloading are also within the scope of this disclosure, such as deciding how much of a processing task or which sub-tasks of a processing task to offload. For example, a vehicular terminal device may be configured to decide to offload part of a processing task for distributed processing, and may decide how much of the processing task should be offloaded and how much of the processing task should be performed locally. In some aspects, a vehicular terminal device may identify certain sub-tasks of the processing task (e.g., certain instructions or subroutines) that should be offloaded for distributed processing and other sub-tasks that should be performed locally without offloading. A non-limiting example may be deciding to offload non-realtime tasks while deciding to perform realtime tasks locally.

FIG. **197** shows an autonomous vehicle radio access network **19700** in accordance with some aspects. It is appreciated that network **19700** is exemplary in nature and may thus be simplified for purposes of this explanation.

Network **19700** may include anchor control nodes **19702-19704**, which include roadside network access nodes, RSUs, eNB, base stations, APs, other types of network access nodes., or any combination thereof. Anchor control nodes **19702** and **19704** may cover regions **19712** and **19714**, respectively. Although shown as having distinct boundaries, it is appreciated that regions **19712** and **19714** may overlap. Anchor control nodes **19702** and **19704** may communicate with each other as components of a core network and/or radio access network structure.

Road **19720** may traverse regions **19712** and **19714**, and therefore, vehicular terminal devices (such as those in clusters **19732-19736**) operating in regions **19712** and **19714** may be configured to operate with the inter-RAT cell handover protocols of the network **19700**.

The distribution of the tasks in this scheme can be done randomly at each vehicular terminal device without significant loss in performance. In this model, the uplink (UL) information exchange occurs using UL protocols such as those defined for LTE, WLAN, LTE-U/LAA (Licensed Assisted Access), or any other radio access technology.

Alternatively, in some aspects a D2D (e.g., one to some or all proximity services (e.g., ProSe for LTE) using the PC5 interface, etc.) or V2V interface may be used to exchange information directly between vehicular terminal devices, e.g., vehicular terminal devices within each of clusters **19732-19736**. By employing D2D/V2V, nodes within the network may be configured to communicate directly with each other. This may be done on a device to device basis, or may be achieved on a device-to-multiple-device basis (e.g., multicast or broadcast).

In some aspects, network slicing can also be employed. In network slicing, a network, such as network **19700**, may be sliced into multiple smaller networks, e.g., one smaller network for each set of vehicular terminal devices **19732-19736** shown in FIG. **197**. As a result, resource sharing is enabled among network nodes and vehicular terminal devices. High capable network nodes or vehicular terminal devices may share their resources (e.g., computational capacity) to assist less capable nodes or devices.

Such network slicing can be end-to-end (E2E), including slicing in the core network and the radio access network (RAN). Each slice may have its own specific architecture, and as a result, splice-specific operation is needed. In other words, resources may be shared among the nodes of each network slice. This sharing may be applied to one aspect of the network focusing on a specific application or service or may be spread across various applications or services. When operating across multiple applications or services, the network slice may be virtualized and improved, or in some cases optimized, specific to each application or service.

Upon reaching an outer edge of a region, such as cluster **19736**, the vehicular terminal devices of the cluster may initiate inter-RAT handover procedures with anchor control node **19704** to another anchor control node (not pictured) for the implementation of the computational frameworks described in FIG. **195** and **196**. However, if no other anchor control node is detected, one of vehicular terminal devices in cluster **19736** may be assigned as the anchor control node responsible for data collection and distribution computations for cluster **19736**. This vehicular terminal device may, for example, be determined by being the one with the highest computational capacity, the vehicular terminal device with an optimal location (e.g., centrally located within cluster **19736**), a vehicular terminal device with the best transmission quality, or any similar method.

The following provide exemplary scenarios by which the frameworks described in FIG. **195** and **196** may be implemented in wireless networks, e.g., autonomous driving of vehicles (cars, drones, etc.), in aspects of this disclosure.

In some aspects, the distribution of computations from anchor control node **19702** to each of vehicular terminal devices in cluster **19732** may account for link quality. In this scenario, anchor control node **19732** may be a network access node such as a base station, and the may determine the link quality with each of a plurality of vehicular terminal devices by measuring parameters such as the channel state information (CSI) of the links, e.g., channel estimation, can enable the network access node may use the CSI to adapt transmissions to each of the vehicular terminal devices based on current channel conditions, e.g., the signal-to-interference-plus-noise ratio (SINR), the Doppler effect, etc. The transmissions, e.g., the assignment of the computations and transmissions during the Shuffling phase (both coded and uncoded), may be adapted to the current channel conditions to achieve reliable communication and satisfy the stringent latency requirements of systems such as autonomous driving systems. In LTE, for example, CSI reports may include a Channel Quality Indicator (CQI), a Pre-coding Matrix Indicator, and/or a Rank Indicator. Other CSI and similar radio channel information may be used for other radio access technologies depending on the RAT-specific implementational details. In this manner, the vehicular terminal devices of cluster **19732** may be assigned computational tasks based on the link quality with base station (anchor control node) **19702**.

In some aspects, the communication protocol for the uplink (between the vehicular terminal devices and the anchor control node) can be done based on protocols such as LTE-Uu, WLAN, LTE-LAA, etc., and the downlink (between the anchor control node and each of the vehicular devices in a cluster, for example) can be performed in broadcast mode using LTE-Uu, eMBMS/V2X protocol.

In some aspects, vehicular terminal devices within each cluster **19732-19736** may communicate with each other using D2D/V2V communications. In this case, only one vehicular terminal device of cluster **19732**, for example, may act as the master node when communicating with the anchor control node, e.g., base station, **19702**. This master node may be determined by which of the vehicular terminal devices in cluster **19732** has the highest link quality with base station **19702** as determined by the CSI reports. Accordingly, the assignment of the computations and the ensuing distribution of the computations may be controlled by base station **19702** through this master node of cluster **19732**.

In some aspects, if there is no suitable anchor control node (for example, no base station, RSU, AP, or other network access node to the core network), one of the vehicular terminal devices within a cluster may be assigned the responsibility of the anchor node and communicate with the other vehicular terminal devices via D2D/V2V communication, either on a device to device basis or a multicast basis. The computations may be assigned, for example, based on the computation capacity of each of the vehicular terminal devices in relation to the anchor control node, or based on the link quality between the anchor control node and the other vehicular terminal devices.

In some aspects, the distribution of computations in the Shuffling phase used for the reduce phase may be performed based on certain factors. One of these factors may be a geographical location of the vehicular terminal device as determined by, for example, by Global Positioning System (GPS). The geographical location of a vehicular terminal device may be used to limit the amount of information transmitted to certain vehicular terminal devices so that only critical information is transmitted. In one exemplary scenario, the vehicular terminal device at the head of cluster **19732** (the block, e.g., "car," furthest to the right of cluster **19732**, assuming the "cars" are traveling towards region **19714**) may, for example, not have use for certain information and/or computations that the last "car" in cluster **19732** uses, since the lead "car" has already passed this location. Similarly, network **19700** may be configured to pass information and computations from one cluster, e.g., from a lead cluster **19734**, to another cluster, e.g., a trailing cluster **19732**, in order to reduce or minimize the amount of information needed to be performed in the by cluster **19732**.

FIG. **198** shows communication system **19800** for a vehicular terminal device in an aspect of this disclosure. It is appreciated that communication system **19800** is exemplary in nature and may be simplified for purposes of this explanation. While certain components of communication system **19800** are shown as individual components, it is appreciated that multiple components may be combined into one component with the function of each of its constituents. Similarly, each individual component of communication system **19800** may be split into two or more separate components.

It is further appreciated that some aspects of communication system **19800** can overlap with components described in FIG. **192**. Communication system **19800** shows components to illustrate the application of the methods and processes described herein, and therefore, may not show all of the components of a vehicular terminal device.

Communication system **19800** may include antenna system **19802** configured to transmit and receive radio signals. In some aspects, antenna system **19802** may be one or more antennas configured in the manner of antenna system **19202** of terminal device **19102** in FIG. **192**.

Communication system **19800** may include transceiver **19804** configured to transmit and/or receive communications with external sources via wireless interfaces, e.g., LTE, Wi-Fi, D2D communications, etc. In some aspects, transceiver **19804** may be configured in the manner of RF transceiver **19204** of terminal device **19102** in FIG. **192**.

Communication system **19800** may further include processing module **19806**, including data acquisition module **19808**, computation module **19810**, and reduction module **19810**. In some aspects, one or more of processing module **19806**, data acquisition module **19808**, computation module **19810**, and reduction module **19810** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. In some aspects, one or more of processing module **19806**, data acquisition module **19808**, computation module **19810**, and reduction module **19810** may be modem-layer or application-layer components, such as components of a baseband modem in the manner of baseband modem **19206** of FIG. **192** or as components of an application processor in the manner of application processor **19212** of FIG. **192**.

Processing module **19806** is configured to transmit and receive data as radio signals via radio transceiver **19804** and antenna system **19802**. Processing module **19806** may transmit and receive the data on a logical software-level connection that relies on a radio access connection for low-layer transport.

Data acquisition module **19808** may include any form of component which the terminal device uses to acquire data to be employed in the computations of this disclosure, such as cameras configured for capturing images, radar sensors configured to determine distance estimates, GPS circuitry configured for determining geographic information, speedometer circuitry configured for determining speed information of the vehicular terminal device, etc. Data acquired by each vehicular terminal device may be transmitted to an anchor control node, or directly to other vehicular terminal devices (e.g., via D2D communications), via transceiver **19804**.

Computation module **8010** may be configured to perform the mapping and/or coding processes described above. Computation module **19810** may be configured to receive the mapping assignments via transceiver **19804** and perform the computations of the mapping tasks. Furthermore, computation module **19810** may be configured to code the transmissions to be sent via transceiver **19804** in accordance with the framework described in FIG. **196**, such as with a coded MapReduce scheme.

reduction module **19812** may be configured to receive computations from other nodes via transceiver **19804** and perform a reducing task to compile (reduce) the information to obtain the final results which will be used by the vehicular terminal device, e.g., a complete scene reconstruction for autonomous driving, an autonomous driving decision, or a collision avoidance decision.

FIG. **199** shows method **19900** of wireless distributed computation in accordance with some aspects. In some aspects, method **19900** can provide a method for execution at a first vehicular terminal device of coordinating with other vehicular terminal devices to perform a distributed computation. As shown in FIG. **199**, method **19900** includes obtaining local sensor data for a local area of the first vehicular terminal device (**19910**), performing a distributed mapping processing task on the local sensor data to obtain a first intermediate distributed processing output (**19920**), providing the first intermediate distributed processing output to a second vehicular terminal device according to a distributed processing shuffling scheme (**19930**), receiving a second intermediate distributed processing output from a third vehicular terminal device according to the distributed processing shuffling scheme (**19940**), and performing a distributed reducing processing task on the first intermediate distributed processing output and the second intermediate distributed processing output to obtain a final distributed processing output at (**19950**).

FIG. **200** shows method **20000** of wireless distributed computation in accordance with some aspects. In some aspects, method **20000** can provide a method for execution at an anchor control node for coordinating a distributed computation between vehicular terminal devices. As shown in FIG. **200**, method **20000** includes assigning a respective distributed mapping processing task to each of a plurality of vehicular terminal devices (**20010**), receiving a plurality of distributed intermediate processing outputs from the plurality of vehicular terminal devices based on the respective distributed processing tasks at (**20020**), and routing the plurality of distributed intermediate processing outputs between the plurality of vehicular terminal devices according to a distributed processing shuffling scheme at (20030).

6.2 Device Cooperation #2

In some aspects of this disclosure, terminal devices may utilize D2D communications to pair with incumbent peer devices already on a network in order to implement a cell search and acquisition process to establish a network connection.

FIG. **11** shows the problem with a terminal device connecting to wireless network **20100**in an unknown environment identified in an aspect of this disclosure. Wireless network **20100** may include a macro cell station **20110** and small cell stations **20112-20114** with their corresponding coverage regions **20120-20124**, respectively. Terminal devices **20150-20158** are within coverage of heterogeneous network **20100**, which may support several radio access technologies (RATs), e.g., LTE, 5G, GSM, CDMA, UMTS, etc. Furthermore, terminal devices **20150-20158** are capable of supporting D2D communications, and may be, for example, user equipment (UE). It is appreciated that network **20100** is exemplary in nature and may thus be simplified for purposes of this explanation.

Macro cell station **20110** may be associated with a specific RAT of heterogeneous network **20100**. In an exemplary LTE setting, macro cell station **20110** may be for example, an eNodeB (eNB) station of an LTE network, in which case macro cell station **20120** supports at least LTE communications. Macro cell station **20110** may therefore act as an interface between the RAN of the LTE network and an underlying core network of wireless network **20100** and may allow closely located terminal devices, e.g., terminal devices **20150-20158**, to exchange data with the core network of wireless network **20100** and any other connected networks. Macro cell station **20110** and terminal devices **20150** and **20158** may operate in the manner for other radio access technologies. Small cell stations **20112-20114** may each be associated with the same RAT as macro cell station **20110** or may be associated with a different RAT, in which case wireless network **20100** may be a heterogeneous wireless network. Either of small cells **20122-20124** may be a femtocell, picocell, or microcell, for example, and may further be configured as closed subscriber group (CSG) cell.

In an unknown network environment, terminal devices may execute a full band search in order to register with the network and acquire further radio access network parameters in order to establish a network connection. The respective search and acquisition process may both be time-consuming and power-intensive.

For example, upon entering within range of the network **20100**, terminal device **20150** may have to perform a full band search of all of the RAT frequencies which are supported by terminal device **20150** and obtain the network parameters from the results of the scan in order to find the most suitable connection to network **20100**. After conducting the full frequency band search **20160** of all of the RAT frequencies supported by terminal device **20150,** terminal device **20150** will identify that it is within range of cells **20120-20124**. Terminal device **20150** will then receive the network parameters from each of the stations **20110-20114** and identify which cell provides the most suitable connection to the network.

In an LTE example, LTE downlink is the signal from the base station to the UE. LTE downlink uses Orthogonal Frequency Division Multiple Access (OFDMA) scheme, which is a multiple access version of Orthogonal Frequency Division Multiplexing (OFDM). OFDM is a frequency-division multiplexing which splits the carrier frequency bandwidth into many small subcarriers and then modulates each individual subcarrier using a digital modulation format. This allows encoding of digital data on multiple carrier frequencies.

OFDMA provides for high data rate through the radio channel as well as other advantages, for example, efficient implementation using Fast Fourier Transforms (FFT) and robustness against inter-symbol interference. However, it also has a high Peak-to-Average Power Ratio (PAPR). While in the downlink this may not be much of a concern since the base station may be well equipped to handle the power consumption and heat dissipation issues, this presents a problem if used in the LTE uplink.

LTE uplink is the signal from the UE to the base station and uses Single Carrier Frequency Division Multiple Access (SC-FDMA) scheme. SC-FDMA has a lower PAPR than OFDM. As a result, SC-FDMA reduces battery power consumption and design complexity compared to OFDM. SC-FDMA also differs from OFDM in that data may be spread across multiple subcarriers, whereas in OFDM, each subcarrier (or frequency component) carries unique information.

In LTE standards supporting D2D communication, a portion of the available bandwidth spectrum may be dedicated for the support of D2D communication. The direct interface between two devices supporting D2D communication may reuse the existing frequency allocation. To reduce or minimize the power consumption and hardware impact on the UE, transmission of D2D communications may occur in the uplink band, e.g., D2D communications also employ SC-FDMA. Other radio access technologies may similarly allocate certain bandwidth spectrum for D2D communication, and can analogously be used in the manner detailed below.

In the exemplary setting of FIG. **201**, terminal device **20150** enters into an unknown environment consisting of cells **20120-20124** in scenario **20100A**. Upon entering into the unknown environment, terminal device **20150** may be configured to search for a peer group, e.g., other terminal devices, within range of its D2D communication capabilities (shown as the shaded oval), and contacts terminal devices **20152-20156**. The peer group may be pre-defined by loose selection criteria, e.g., same operator, same original equipment manufacturer (OEM) or same employer/enterprise information technology (IT) managed device, etc. While terminal device **20158** may fall within the pre-defined peer group, it may be out of range of the D2D capabilities of terminal device **20150**.

As shown in **20100A**, the "incumbent" (e.g., with network connections already established) terminal devices **20152-20154** are connected to cells **20122**, **20120**, and **20124** of stations **20112**, **20110**, and **20114**, respectively, and therefore, have the requisite network parameters for connecting to network **20100** via the respective station.

Terminal devices **20152-20156**, may provide terminal device **20150** (the new terminal device) with the radio access parameters via messages over the low power and fast D2D link in **20100B**. These network parameters may include, for example, location of the station and connectivity or telemetry data for enabling a new device to register with the network. In another aspect of this disclosure, the incumbent devices may share their position (e.g., as obtained via any GNSS or other geopositioning system) with terminal device **20150** in order to speed up the time for terminal device **20150** to establish a connection to network **20100**. Once the appropriate data is received from the incumbent terminal devices **20152-20156**, terminal device **20150** will just need to verify this connectivity or telemetry data, but not perform a full scan.

By establishing a D2D link with a peer group of incumbent terminal devices, terminal device **20150** may obtain connectivity and telemetry data from each of the incumbent terminal devices. The link can be established with device discovery and link setup procedures, which may rely on RAT-specific procedures, such as device discovery and link setup procedures as outlined by the 3GPP in LTE Device to Device Proximity Services (Release 12) or LTE-Based Vehicle-to-X Services (Release 14). This data may include any parameters that facilitate the connection of terminal device **20150** to network **20100** via any one of stations **20110-20114**, such as, for example, RAT type (e.g., GSM, UMTS, LTE, etc.), frequency band, mobile country code (MCC), mobile network code (MNC), downlink carrier frequency (e.g., E-UTRA Absolute Radio Frequency Channel Number (EARFCN)), cell identity parameters (e.g., physical cell ID (PCI)), reference signal receive power (RSRP), reference signal receive quality (RSRQ), Signal-to-Noise Ratio (SNR), Signal-to-Interference-Plus-Noise Ratio (SINR) values, round trip delays, system information (e.g., MIB and SIBs (e.g., SIB1-SIB12), which may be decoded or encoded such as with Abstract Syntax Notation one (ASN. 1)) of best/strongest cells, etc.

Once terminal device **20150** has received the necessary network parameters from incumbent terminal devices **20152-20156**, terminal device **20150** may select the best cell from which to connect to network **20100**, e.g., the cell providing the most optimal or most reliable connection. In **20100C**, small cell **20124** is selected as the interface providing the best connection to network **20100**.

By implementing the procedure described in **20100A-20100C**, terminal device **20150** may establish a connection with network **20100** faster while consuming less power than a full band/cell search in public landline mobile network (PLMN). Furthermore, in some aspects, only the terminal devices are configured to implement this aspect of the disclosure, so no changes to infrastructure are required.

In the case that small cell **20124** is a CSG cell, terminal device **20150** may obtain the necessary CSG cell parameters to check to see if it is on the whitelist in order to establish a connection via small cell (CSG) station **20114**. If terminal device **20150** is not a member of CSG cell **20124**, then terminal device may be configured to select the next best cell in order to connect to network **20100**. Terminal device **20150** may employ a similar method in other scenarios in which case it cannot connect to the network via its first choice from the parameters obtained from the incumbent terminal devices.

FIG. **202** shows the channel mapping for the physical, transport, and logical channels of D2D communication. While FIG. **202** may refer to an exemplary LTE setting, this is only for demonstrative purposes, and the concepts can be applied in the same manner to other radio access technologies.

As shown for the exemplary LTE setting for FIG. **202**, the physical channels for D2D communication can include the Physical Sidelink Broadcast Channel (PSBCH), the Physical Sidelink Discovery Channel (PSDCH), the Physical Sidelink Shared Channel (PSSCH), and the Physical Sidelink Control Channel (PSCCH).

In some aspects, the PSBCH carries the system and synchronization related information transmitted from the transmitting UE. The PSBCH is the channel responsible for the discovery phase of D2D communications. The PSDCH carries the Proximity Service (ProSe) discovery message from the UE. The PSCCH carries the Sidelink Control Information (SCI) block which is responsible for carrying the control information for a UE for ProSe direct communication. The PSSCH carries data for D2D communication.

In some aspects, the transport channels include the Sidelink Broadcast Channel (SL-BCH), Sidelink Discovery Channel (SL-DCH), and the Sidelink Shared Channel (SL-SCH). The SL-BCH is mapped onto the PSBCH, the SL-DCH is mapped onto the PSDCH and the SL-SCH is mapped onto the PSSCH. The SL-BCH is a predefined transport format, as is the SL-DCH, which provides a pre-defined format for broadcast information. The SL-SCH provides support for the broadcast transmission.

In some aspects, the logical channels are the Sidelink Broadcast Control Channel (SBCCH) and the Sidelink Traffic Channel (STCH). The SBCCH is mapped onto the SL-BCH and the STCH is mapped onto the SL-SCH. The STCH is a point to multipoint channel for transfer of user information from one terminal device to other terminal devices. In some cases, this channel may only be used by ProSe capable terminal devices, e.g., at least terminal device **20150-20156** shown in FIG. **201.**

The following examples highlight improvements in which utilizing D2D communications to pair with incumbent peer devices already on a network facilitate (e.g., faster, less power consumption) connecting with a network. Generally, in each example, parameters which are useful for the new (e.g., terminal device **20150** in FIG. **201**) device's fast operation and power saving are provided by at least one other incumbent device, rather than the new device acquiring the parameters from a lengthy and power intensive frequency scanning procedure.

In general, terminal devices may discover the 'incumbent' terminal devices through D2D device discovery. A pre-action for D2D communication is for a terminal device to discover another terminal device which transmits the appropriate D2D signals, a process referred to as synchronization. This procedure is similar to the LTE downlink cell search procedure, although at a much lower power. In synchronization, the timing information is first detected from the Primary Sidelink Synchronization Signals (PSSS). Then, the Secondary Synchronization Signal (SSSS) is used in order to obtain the physical-sidelink synchronization identity ( $N_{ID}^{SL}$ ). Once the $N_{ID}^{SL}$ has been detected by the receiving terminal device, the receiving terminal device can use the $N_{ID}^{SL}$ to decode the demodulation reference signal (DMRS) and apply the sidelink reference signal received power (S-RSRP) measurement in order to report the strength of the detected sidelink.

In a first case, the user experience is improved in national/international roaming or out of service recovery use cases where the legacy terminal device procedures (e.g., full frequency band scan) are not efficient. For example, a terminal device will attempt to camp on a previously known cell, but the terminal device will be unsuccessful in establishing a connection by these means if in a new cell. Rather than falling back to the full operating band search (e.g., a 3GPP Operating Band search), the new terminal device will be able to receive related important parameters from an incumbent terminal device, which it may detect via D2D device discovery methods. These important parameters may include, but are not limited to, RAT type, frequency band, MCC, MNC, downlink carrier frequency, cell identity parameters, RSRP, RSRQ, SNR, SINR, round trip delays, system information, etc.

Under some methods, a full operating band search may take several minutes for cell camping, e.g., in international roaming cases. With help of an incumbent device, e.g., from a same operator, with D2D communications range, cell camping time can be significantly reduced compared to certain cases (e.g., some 3GPP LTE cell camping times).

For example, some full band scans in LTE Band 3 may take a few seconds (700 frequencies times a few ms per frequency). Each band, however, has a different number of frequencies and therefore, total time between bands may vary. In a possible worst case scenario, the total band search across all bands will be the sum of all the bands. This band scan may include acquisition of master information block (MIB), system information block (SIB) 1, and SIB 2, which may take a few hundred ms.

By implementing the methods and devices of this disclosure, the new terminal device may determine the MCC and MNC from location information, e.g., latitude and longitude from GPS position fix, provided by at least one incumbent device (e.g., closely located terminal device from a pre-defined peer group). The number of bands and cells searched are therefore significantly reduced, resulting in faster cell camping at reduced power expenditure.

In a second case, the radio resource control (RRC) connection may be quickly established by implementing methods and devices of this disclosure. Abstract Syntax Notation one (ASN.1) encoded MIB, SIB1 and other SIBs (e.g., SIB1-SIB12) of the best/strongest signal quality cells as reported by the incumbent UEs can be shared with the new terminal device for fast RRC connection. In certain searches (e.g., some 3GPP legacy searches), this may take several hundred ms receive activity for the new terminal device, e.g., this search may be both time and power intensive. However, by obtaining these parameters from incumbent terminal devices, the new terminal device is prepared for quick RRC Connection Establishment without needing such time and power intensive methods.

In another case, the GPS time to first fix is significantly shortened and/or less power intensive. The new terminal device receives a message with location information from at least one other incumbent device in order to assist with data to speed up the GPS positioning fix. In another aspect, the new device uses location information from the incumbent devices as an approximate location for location based services, thereby allowing the new device to keep its own positioning engines in low power mode, rather than using the power intensive GPS subsystem to determine position.

In some aspects, the methods and devices of this disclosure may further be configured to exploit D2D deployment topology to provide for faster and less power intensive search and connection procedures.

In a one-to-one topology scenario, the methods and devices of this disclosure according to some aspects may be applied to paired devices, e.g., a smart watch (with terminal device functionality) paired with a smart phone. Smart watches typically have much smaller batteries than smart phones, and as a result, the power saving methods described in this disclosure are highly effective in improving user experience. The smart watch can receive the GPS fix and other parameters mentioned in this disclosure from the smart watch owner's phone via D2D links to save power for cell camping (selection/re-selection) and RRC connection establishment or re-re-establishment procedures or positioning.

In a one-to-many or many-to-many topology scenario, for a closed user group of terminal devices of the same operator, e.g., company employees at a certain office site, the methods and devices of this disclosure according to some aspects may be configured so that some or all of the terminal devices of the group do not need to perform serving cell and neighbor cell measurements and SIB acquisition during the time the terminal device is within the office site during office hours. Instead, only a few terminal devices may become the 'incumbent' devices and perform cell measurements while the 'other' terminal devices may obtain these measurements from the 'incumbent' devices by querying the 'incumbent' devices via D2D communications. In this manner, the other terminal devices conserve power resources.

The 'incumbent' (e.g., master) and 'other' (e.g., slave), roles can be assigned, for example, in a round robin fashion to distribute the power penalty incurred on the master role (e.g., attributed to the conducting of measurement procedures) uniformly over different UEs during the day. This topology will reduce energy consumption of the terminal devices because at any moment in time only a few terminal devices will perform the regular measurement jobs (e.g., as defined by 3GPP standards) and the rest of the terminal devices (others, e.g., slaves) can rely on the master terminal devices to provide the needed information via more power efficient D2D links either periodically or on request. In a further aspect of this disclosure, more than one terminal device is assigned the master role for redundancy purposes.

For mobile-originated calls, the slave terminal device receives the latest information from the master terminal device (including the case of more than one master terminal device for redundancy). For mobile-terminated calls, the slave can receive a paging notification forwarded from the master terminal device(s) on the D2D channel in addition to the necessary radio access network (RAN) parameters required to establish the connection.

This one-to-many or many-to-many topology of D2D communications of this disclosure may be applied to different scenarios, including public environments such as schools, campuses, shopping venues, hospitals, etc. and private environments such as commercial offices and private residences (e.g., homes, apartments, dormitories, hotels, etc.),

Cellular, as well as non-cellular D2D physical (PHY) layers, can be used to communicate among peer group, e.g., Wi-Fi-Direct technology, Bluetooth low energy (BLE) or LTE D2D (Release 12 or later). The peer group operator (e.g., mobile network operator, OEM, employer IT department) may pre-configure the data (e.g., PHY layer parameters, security credentials (authentication/encryption) and pairing information) necessary to pair with other devices.

A new protocol can be implemented on top of the radio communication protocol stack (e.g., in the application layer) to exchange the radio access network (RAN) parameters, similar to the ASN. 1 structure for data exchange. Security techniques may be used to validate that the RAN parameters are provided by an authorized device. In some aspects, the radio communication protocol stack can provide connectivity-related information such as the RAN parameters to the new upper protocol via a pre-defined interface between the existing radio communication protocol stack and the new upper protocol.

In some aspects, in order to implement the methods of this disclosure, a peer group management component is installed into each device and pre-configured by the peer group operator. This management component manages the peer group operation and handles user interaction.

When a new device is turned on and wants to join a peer group, the new device searches for peers using, for example, established discovery procedures. In response, the incumbent devices expose themselves to the new device. If there are no discovered incumbent devices, the new device may then perform the scanning and connection procedures, and thereby become the incumbent device for some or all subsequent new devices.

When a device needs assistance information, it may multi-cast a request for assistance data to incumbent devices. For example, in the case of a "same operator" per group, this may include a request for RAN parameters for fast cell camping procedures.

In a further aspect of this disclosure, the incumbent devices may multi-cast specific sets of assistance data to the peer group in an unsolicited manner. For example, in the case of the 'same operator' peer group, this may include broadcasting RAN parameters for fast cell camping procedures.

In another aspect of this disclosure, user approval may be requested, e.g., by clicking a button, before accepting incumbent device input before implementing any procedure resulting from said incumbent device input.

In general, these aspects can be applied to all systems and use cases in which time-consuming and power hungry procedures are required by a terminal device to receive and acquire context and telemetry information broadcast by the network and required to establish or maintain a connection to the network. Context and telemetry data broadcast by the network may be considered non-sensitive in terms of privacy or security, thereby eliminating the need for additional protection mechanisms.

FIG. **203** shows method for connecting to a network using D2D links in an aspect of this disclosure. It is appreciated the method **20300** is exemplary in nature and may therefore be simplified for purposes of this disclosure.

Upon entering into a new cell or powering on at **20302**, a terminal device (e.g., a UE) searches for an incumbent device at **20304** from a peer group as defined by its peer group management component. After performing the D2D discovery procedure, the terminal device determines if an appropriate incumbent device is found at **20306**.

If no incumbent device is found (or if no suitable connection with an incumbent device of a peer group could be established), the device will perform the regular frequency band scan and connect to the network and establish itself as an incumbent device for some or all subsequent new devices at **20320**.

However, if an incumbent device (or multiple incumbent devices) is found at **20306**, the device will establish a connection with the incumbent device(s) via D2D at **20308**. The device will then receive the network parameters from the incumbent device(s) via the established D2D link at **20310**. If multiple incumbent devices belonging to different cells are found, the device may be further configured to select the parameters from the incumbent device which provides the best network connection e.g., highest RSRP, RSRQ, lowest SINR, etc. In some aspects of one-to-many or many-to-many topologies, the number of incumbent devices that are queried can be limited to a configurable quantity. Non-limiting examples can include 3 or 4 incumbent devices. Accordingly, the device will only query up to the configurable quantity of incumbent devices, which may limit the processing effort for received messages at the device. This may limit power consumption at the device and keep power consumption below that of conventional cell search procedures (e.g., a 3GPP cell search procedure).

After receiving the network parameters from the incumbent device (or selecting the network parameters from the incumbent device which provides the best network connection), the device may connect to the network at **20312**.

FIG. **204** shows communication system **20400** for a terminal device in accordance with some aspects. It is appreciated that communication system **20400** is exemplary in nature and may be simplified for purposes of this explanation. While certain components of communication system **20400** are shown as individual components, it is appreciated that multiple components may be combined into one component with the function of each of its constituents. Similarly, each individual component of communication system **20400** may be split into two or more separate components.

It is further appreciated that aspects of communication system **20400** may overlap with components described in FIG. 192. Communication system **20400** shows components to illustrate the application of the methods and processes described herein, and therefore, may not show all of the components of a vehicular terminal device.

Communication system **20400** may include antenna system **20402** configured to transmit and receive radio signals. In some aspects, antenna system **20402** may be one or more antennas configured in the manner of antenna system **19202** of terminal device **19102** in FIG. **192**.

Communication system **20400** may include transceiver **20404** configured to transmit and/or receive communications with external sources via wireless interfaces, e.g., LTE, Wi-Fi, D2D communications, etc. In some aspects, transceiver **20404** may be configured in the manner of RF transceiver **19204** of terminal device **19102** in FIG. **192**.

Communication system **20400** may further include processing module **20406**, including acquisition and verification module **20408**, selection module **20410**, and scanning module **20412**. In some aspects, one or more of processing module **20406**, acquisition and verification module **20408**, selection module **20410**, and scanning module **20412** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. In some aspects, one or more of processing module **20406**, acquisition and verification module **20408**, selection module **20410**, and scanning module **20412** may be modem-layer components, such as components of a baseband modem in the manner of baseband modem **19206** of FIG. **192**.

Processing module **20406** is configured to transmit and receive data as radio signals via radio transceiver **20404** and antenna system **20402**. Processing module **20406** may transmit and receive the data on a logical software-level connection that relies on a radio access connection for low-layer transport.

Acquisition and verification module **20408** is configured, upon establishment of a D2D communication link with a discovered incumbent device, to acquire network parameters from the incumbent device and verify these parameters in order to connect to the network using these acquired network parameters.

Selection module**20410** is configured, in the case where more than one incumbent device is discovered, to select the network parameters from the incumbent device which provides the best connection to the network. Selection module **20410** may be configured to determine which network parameters provide the best connection to the network based on RSRP, RSRQ, SINR, round trip delays, or other related parameters which may determine link quality.

Scanning module **20412** is configured to perform a conventional frequency band scan if no incumbent devices are discovered by the terminal device, or in the case where the appropriate network parameters were unable to be obtained via the D2D link with an incumbent device.

In either case, upon establishing a network connection, the terminal device may establish itself as an incumbent device, and be able to transmit the network parameters of its connection to the network to other devices through its transceiver **20404**.

FIG. **205** shows method **20500** for telemetry aid over D2D in accordance with some aspects. As shown in FIG. **205**, method **20500** includes establishing a direct wireless link with at least one other terminal device, wherein the at least one other terminal device is connected to a wireless network (**20510**), receiving, over the direct wireless link from the at least one other terminal device, network connection parameters to the wireless network (**20520**), and attempting a connection to the wireless network based on the network connection parameters (20530).

In some aspects, if the communication device establishes a wireless link with more than one other terminal device, the communication device may be further configured to evaluate the multiple network connection parameters and select the network parameters used for attempting to connect to the network based on a criteria, e.g., one or a combination of: highest RSRP, highest RSRQ, lowest SINR, lowest round trip delay, etc.

6.3 Device Cooperation #3

In some aspects of this disclosure, a terminal device may share information through D2D communication to provide channel parameter information to closely located terminal devices in order to improve link robustness (uplink and/or downlink throughput) and mobility performance (handover and cell selection/reselection performance) of each of the terminal devices.

FIG. **206** shows a D2D cooperative communication scenario **20600** in accordance with some aspects. As shown in FIG. **206**, co-located (e.g., within range of a direct D2D channel) terminal devices **20730-20732** are grouped together and can use D2D link **20650** to directly exchange information. For example, terminal devices **20730-20732** can share parameter information for network access node such as network access node interferences, neighboring network access node database, etc. with each other through D2D link **20650**. Terminal devices **20730-20732** can then utilize this shared parameter information to improve various key performance indicators (KPIs), in particular related to downlink scenarios including downlink throughput and successful inter-cell handover rate. Terminal devices may explore co-located channel correlations to apply j oint network access node channel state information (CSI) estimation to improve the link robustness between each terminal device and the network access node.

In accordance with some aspects of this disclosure, terminal devices such as terminal devices **20730-20732** may utilize D2D links to share information such as radio channel information. Terminal devices **20730-20732** may then utilize the shared radio channel information to improve downlink reception, such as by combining the shared radio channel information along with locally obtained radio channel information to obtain j oint radio channel information or by using the shared radio channel information for interference mitigation.

In particular, many radio access technologies rely on channel estimation in order to improve, or in some cases to optimize, uplink and downlink performance. Accurate channel estimation may yield highly effective channel equalization, and enable terminal devices to enjoy high performance radio transmission and reception. For example, in an exemplary LTE setting, downlink transmissions may use Orthogonal Frequency Division Multiple Access (OFDMA) modulation schemes to overcome Inter-Symbol Interference (ISI) caused by multipath fading in multiple input multiple output (MIMO) schemes. OFDMA implements orthogonal spaced sub-carrier signals and inserts a cyclic prefix (CP) as a guard interval to eliminate ISI. To compensate for distortion resulting from the propagation of transmission of the signal through communication channels, terminal devices can perform channel estimation to increase capacity and enable proper signal detection and data demodulation. The more accurate the channel estimation, the better the receiver is generally able to receive data from the transmitter. To facilitate channel estimation, LTE uses reference signals consisting of pilot symbols in the time and frequency domains to provide an estimate of the channel at given locations within a subframe. The pilot symbols are used to provide a reliable estimate of the complex gains of each resource element of signal transmission through the communication channel. Using the known pilot symbols to estimate the channel, the terminal device may equalize the effects of the communication channel and reduce the noise on the received signals.

Many other radio access technologies may similarly use channel estimation techniques to perform channel equalization during downlink reception. Precoding techniques also rely on accurate channel estimation, where a transmitter such as a network access node may 'precode' downlink transmissions based on knowledge of the channel response, which may mitigate corruptive channel effects and enable a receiver such as a terminal device to have high reception performance.

Some aspect may group co-located terminal devices, such as closely located terminal devices **20730-20732**, through D2D communications and, within the group, enable sharing of the radio channel information obtained from each terminal device and the common network access node. This radio channel information can include, but is not limited to: inter-network access node interferences, neighboring network access node database information, and other parameters used in channel estimation methods, for example. Sharing such radio channel information between the terminal devices provides for improved KPIs between each of the network access node(s) and the terminal device(s).

By sharing radio channel information over D2D links, terminal devices **20730-20732** can share their channel correlations (by virtue of co-location) by combining local radio channel information (e.g., locally estimated) with the shared radio channel information received from the other terminal devices. For example, terminal device **20730** may derive local radio channel information by receiving and processing downlink signals from network access node **20610**, and may then receive shared radio channel information from terminal device **20732**, where terminal device **20732** obtained the shared radio channel information by similarly receiving radio signals from network access node **20610**. Terminal device **20730** may then combine the local radio channel information with the shared radio channel information as part of a joint radio channel estimation procedure for network access node **20610**, which may yield a more accurate radio channel estimate (compared to performing the radio channel estimation procedure with only the local information). Downlink reception performance may therefore be improved. Terminal device **20732** can similarly use shared radio channel information provided by terminal device **20730** in a joint radio channel estimation procedure.

The information sharing via the D2D link may produce a latency, where the shared radio channel information provided by terminal device **20732** may have an earlier time basis than the local radio channel information at terminal device **20730**. Accordingly, in some aspects may utilize a time-interpolation method so that the shared radio channel information is combined with the local radio channel information on the same time basis.

In FIG. **206**, the arrows between the terminal devices **20730-20732** and network access node **20610** illustrate the network access node-terminal device link (high throughput), for example, through multiple user MIMO schemes. The dashed line **20650** represents the cooperative D2D link (low throughput, low latency) used in an aspect of this disclosure to share joint channel parameter estimation, neighboring cell database, interference, and other information.

To implement the cooperative sharing methods for fast handover, terminal devices can share radio channel information for a network access node with other terminal devices. The radio channel information can include neighboring network access node database and downlink channel state information (CSI) such as power level, frequency offset, delay spread, channel response (e.g., channel estimate), or another measure of radio channel information. As previously indicated, in some aspects such as where terminal devices **20730-20732** are communicating with the same network access node, e.g., network access node **20610**, the terminal devices may combine the shared radio channel information (received from the other of terminal devices **20730-20732**) with local radio channel information as part of a joint radio channel estimation procedure. Accordingly, in these aspects terminal devices **20730-20732** may utilize the j oint radio channel estimation procedure to improve downlink field performance, such as in channel equalization or channel estimation reporting (e.g., to network access node **20610** for precoding purposes). In some aspects, terminal devices **20730-20732** may calculate a precoding matrix and transmit a precoding matrix indicator (PMI) that corresponds to the precoding matrix to network access node **20610**, which may then precode downlink data for terminal devices **20730-20732** according to the precoding matrix corresponding to the PMI.

Further, in some aspects terminal devices **20730-20732** may be located proximate to each other but be receiving from different network access nodes, such as where terminal devices **20730-20732** are located at the cell edge of their respective serving network access nodes. Accordingly, the downlink transmissions from the first network access node that is serving terminal device **20730** appear as interference to terminal device **20732**, and vice versa for the second network access node that is serving terminal device **20730**. In order to mitigate the interference, terminal devices **20730-20732** may exchange radio channel information for their respective serving network access nodes. Each of terminal devices **20730-20732** may then utilize the shared radio channel information to estimate and cancel the interference from the other network access node, thus mitigating the interference and improving downlink reception performance.

In general, the data sharing methods in accordance with some aspects can be implemented in the physical layer (PHY) by:

(1) Identifying cooperative device candidates and establishing a D2D sharing link. This may be initialized by the network access node based on terminal device location information, or by either of the terminal devices based on spontaneous neighbor device discovery based on D2D signal detection.
(2) Operating the D2D sharing link and applying cooperative communications between the terminal devices through the D2D link.
(3) Terminating the D2D link. The termination of the D2D link may be triggered, for example, by the network access node based on awareness of a terminal device status change (e.g., turning off a terminal device), or it may be triggered by a terminal device based on the awareness of an environment change (e.g., a change from low mobility to high mobility).

As introduced above, two general scenarios are identified in an aspect of this disclosure for the operation and application of the D2D sharing link.

FIG. **207** shows a first scenario **20700** with an accompanying time chart **20800** in FIG. **208** for the operation and application of the D2D sharing link between two terminal devices (in this example, terminal devices) in accordance with some aspects.

Multiple terminal devices, e.g., terminal device **20730** and terminal device **20732**, which are in close proximity (e.g., close enough to exchange information on a D2D channel, which may be, for example, in the range of 500 meters) may be performing downlink reception from different network access nodes in the same frequency carrier, e.g., at a cell edge between the two network access nodes. In this case, the downlink radio channel information is shared between the two terminal devices through the established D2D link for the enhancement of interference estimation. Terminal device **20730** is receiving downlink signals from network access node **20710** and terminal device **20732** is receiving downlink signals from network access node **20712** in the same intra-frequency. The network access node **20710** downlink signal is an interference source to terminal device **20732** reception and network access node **20712** downlink signal is an interference source to terminal device **20730** reception. By establishing a D2D link between the two terminal devices, each of the terminal devices is able to share the radio channel information from their respective network access node with the other, and the terminal devices may use this information to mitigate or cancel the interference from the other network access node, e.g., terminal device **20730** may make use of the radio channel information from network access node **20712** shared from terminal device **20732** to mitigate the inference from network access node **20712**, and vice versa.

Time chart **20800** shows the method by which the terminal devices may implement this interference cancellation in an aspect of this disclosure. It is assumed that terminal device **20730** and terminal device **20732** have already established the D2D link between their devices and that terminal device **20730** and terminal device **20732** share the same time reference.

At t0 (time 0), terminal device **20730** demodulates the network access node **20710** burst data (e.g., 1 Time Transmission Interval (TTI)). Subsequently, through the established D2D link, terminal device **20730** sends the estimated radio channel information of network access node **20710** (e.g., power level, frequency offset error, delay spread, channel transfer function, etc.) with the timestamp (e.g., 10) to terminal device **20732**. At t3, terminal device **20732** needs to demodulate the downlink data burst from network access node **20712**, which is interfered with by network access node **20710** downlink. Here, the infinite impulse response (IIR) model of this disclosure interpolates the network access node **20710**-terminal device 20732 interference at t3 [RCI(t3)] based on the radio channel information (RCI) at t0 received from terminal device 20730 and the previously interpolated interference state from network access node 20710 at tn (time n, at some point n in the future) [RCI(tn)]. The time interval between t3 and tn, as well as the time interval between t3 and t0, weights this interpolation, e.g., RCI(t3) = f(RCI(tn), t3-tn, RCI(t0), t3-t0).

After RCI(t3) is interpolated, it is used as the estimated network access node 20710 interference as the input for network access node 20712-terminal device 20732 demodulation at t3, e.g., for terminal device **20732** to demodulate signals from network access node **20732** by canceling the estimated interference RCI(t3) from downlink signals. After that, the radio channel information at tn, e.g., RCI(tn), and tn are updated: RCI(tn) = RCI(t3) and tn = t3, which are used in the next RCI interpolation.

FIG. **209** shows a second scenario **20900** with an accompanying time chart **21000** in FIG. **210** for the operation and application of the D2D sharing link between two terminal devices (in this example, terminal devices) in accordance with some aspects.

In scenario **20900**, two terminal devices, e.g., terminal device **20730** and terminal device **20732**, are receiving downlink from network access node **20710**, e.g., the same network access node, on the same frequency carrier. For example, network access node **20710** may be broadcasting a same stream to both terminal device **20730** and terminal device **20732**, and as a result terminal devices **20730** and **20732** may be receiving the same data from network access node **20710**. Examples of same streams can include, without limitation, broadcast or multicast streams such as Multimedia Broadcast Multicast Service (MBMS), broadcast or multicast control data or system information, or other types of same data that a network access node can transmit to multiple terminal devices. In this case, terminal devices **20730** and **20732** can implement joint radio channel estimation by sharing radio channel information between the terminal devices by a D2D link. As terminal devices **20730** and **20732** may as a result have both local radio channel information (obtained locally) and shared radio channel information (from the other terminal device), terminal devices **20730** and **20732** may apply joint radio channel estimation using both the local and shared radio channel information to improve downlink robustness at each of terminal devices **20730** and **20732.** For example, terminal devices **20730** and **20732** can apply the joint radio channel estimates in channel equalization to correct channel corruptions, which may yield improved downlink performance (in particular relative to radio channel estimation that uses only local radio channel information)

Time chart **21000** shows an exemplary application of the joint radio channel estimation by the two terminal devices in an aspect of this disclosure. In time chart **21000,** the network access node broadcasts a stream to terminal device **20730** and terminal device **20732**. Terminal device **20730** and terminal device **20732** can be located in a manner in which a D2D link is established between them, e.g., D2D synchronization and communication between terminal device **20730** and terminal device **20732** is established. In this scenario, it is assumed that terminal device **20730** and terminal device **20732** share the same time reference. Furthermore, strong radio channel correlations between network access node-terminal device **20730** and network access node-terminal device **20732** are assumed due to the close proximity between terminal device **20730** and terminal device **20732**.

At t0, terminal device **20730** demodulates burst data from network access node 20710 (e.g., 1TTI) and obtains local radio channel information, e.g., a local radio channel estimate. Subsequently, through the established D2D link with terminal device **20732**, terminal device **20730** sends the local radio channel estimate of network access node **20710** (e.g., power level, frequency offset error, delay spread, channel transfer function, etc.) together with a timestamp (e.g., 10) to terminal device **20732**.

At t3, terminal device **20732** demodulates the downlink from network access node 20710. By implementing an IIR model to make use of the radio channel estimate shared from terminal device **20730** at t0, the local radio channel estimate at t3 between terminal device 20732-network access node is interpolated based on the shared radio channel estimate at t0 of terminal device **20730**-network access node **20710** and a previous interpolation of the local radio channel estimate between terminal device **20732**-network access node at time tn. Furthermore, the radio channel interpolation at t2 may be configured to weight the current terminal device **20732** local radio channel estimate at t3 (e.g., RCI'(t3)) and may be shown by the following: RCI(t3) = f (RCI(t1), t3-t1, RCI(t0), t3-t0), RCI'(t3)).

After RCI(t3) of terminal device **20732**-network access node **20710** is interpolated the RCI(tn) and tn are updated: RCI(tn) = RCI(t3) and tn = t3, which are used in the next radio channel estimate interpolation

In some aspects, differentiation between terminal device knowledge history (e.g., information from multiple network access nodes) can be exploited for extending and implementing the information sharing between terminal devices at higher layers (e.g., layers above the PHY layer).

In some cases, a first terminal device in high mobility (e.g., in a train or car) may not only have information on the local communication conditions (e.g., currently camped on cell) but also have information it has acquired from near-by and/or far-locations. This may include information, for example, of the heterogeneous communication environment. The information fathered by the first terminal device may be of interest to a second terminal device which may be moving in a similar direction from which the first terminal device came from, and therefore, the second terminal device may need the corresponding information for planning its configuration ahead of time. For example, the second terminal device may request the presence of specific RATs from the highly mobile terminal device.

However, for a third terminal device of static/low-mobility, the information from the first terminal device may be of little value, and therefore, not required for optimizing device performance. Furthermore, the first terminal device (e.g., the highly mobile terminal device) may not have highly detailed information from a previously visited location because it spent very little time in that location, e.g., drove through the cell in a car on a highway. When requesting information from a device such as the first terminal device, in an aspect of this disclosure, the trade-off between broad geographic coverage and low level of detailed observation is thus accounted for.

The third terminal device (e.g., a terminal device in low mobility or static setting) may, on the other hand, have detailed knowledge of a heterogeneous wireless environment in a specific location where it is largely stationed. However, this terminal device may have little or no information from more distant network environments due to its low mobility range. When requesting information from such terminal a device, in an aspect of this disclosure, the trade-off between limited geographic coverage and the high level of detailed observation of a specific wireless environment is thus accounted for.

In another setting, there may be a hybrid case of the characteristics exhibited by the first terminal device and the third terminal device, e.g., a terminal device which stays in a particular location for a while and then travels to another location. Such a terminal device may be highly valuable for sharing information from its first location to other devices at the second location since it will be able to provide detailed information for the environment of multiple specific further away locations.

In order to more effectively share network information between terminal devices by D2D communications, some aspects can implement a device knowledge history (DKH) classification system which may be stored on each terminal device and may be communicated to other terminal devices through D2D links in order to effectively share information between terminal devices.

A terminal device, therefore, may be configured to classify itself into a particular DKH class, thereby indicating to other terminal devices the kind of information it may have obtained. The following are exemplary classes in which a terminal device may be classified.

A first class may be "Local Knowledge Class-Heterogeneous." A terminal device in this class has detailed knowledge on a local heterogeneous communication environment (e.g., a low mobility device with network parameters of one or more closely located macro cells and other small cells located within the closely located macro cells, e.g., a CSG cell).

A second class may be "Local Knowledge-homogeneous." A terminal device in this class has detailed knowledge on a local homogeneous communication environment (e.g., information on a specific wireless standard such as LTE, Wi-Fi, etc.)

A third class may be "Wide Spread Knowledge-heterogeneous." A terminal device in this class has some limited knowledge on the heterogeneous communication environment over a larger area.

A fourth class may be "Wide Spread Knowledge-homogenous." A terminal device in this class has a limited knowledge on the homogeneous communication environment over a large area (e.g., information on a specific wireless standard such as LTE, Wi-Fi, etc.)

A fifth class may be "Wide Spread Knowledge with some hotspots-heterogeneous." A terminal device in this class has limited knowledge on the heterogeneous communication environment over a large area with some detailed knowledge of some specific areas (e.g., high mobility device that spent more than extended period of time in a particular location along its journey).

A sixth class may be "Wide Spread Knowledge with some hotspots-homogeneous." A terminal device in this class has some limited knowledge on the homogenous communication environment over a large area with some detailed knowledge of specific areas (e.g., information related to a specific wireless standard, such as, for example, LTE, Wi-Fi, etc.)

Accordingly, when a first terminal device seeks to exchange information with a second terminal device, each of the terminal devices may identify themselves under the right DKH class such that an improved, and in some cases the optimum, type of information is exchanged.

FIG. **211** shows a communication network **21100** with two terminal devices, terminal devices **21130** and **21140**, of different DKH classes. In this exemplary scenario, it is assumed that all network access nodes **21110-21115** are cellular network access nodes (e.g., eNodeBs or another type of cellular network access node) with corresponding coverage areas **21120-21125**. Furthermore, small cell **21131** may be a short-range network access node or cellular small cell network access node, such as a Wi-Fi hotspot, LTE femtocell, or other type of short-range or cellular small cell network access node.

In this scenario, terminal device **21130** is classified as a "Wide Spread Knowledge-homogenous" device and terminal device **20990** is classified as a "Local Knowledge Class-Heterogeneous" device. Accordingly, if terminal device **21130** enters into cell **21121** and establishes a D2D link with terminal device **21140**, terminal device **21150** can benefit from obtaining the highly detailed information for coverage area **21121** and coverage area **21131** from terminal device **21140**.

In some aspects, protection bands in unlicensed spectrum can be coordinated among neighboring groups of terminal devices so that various levels of interference protection are guaranteed between the terminal devices. Depending on the requisite needs, terminal device groups can be forced into band slots of high/medium/low additional interference protection. For example, terminal devices experiencing significant interference, e.g., cell-edge terminal devices, can be forced into the highest quality band slot in a hybrid automatic request (HARQ) process.

In some aspects, neighboring terminal devices may exchange information via D2D on the observed performance gains and performance/power consumption trade-offs of lower layer software components.

In some aspects, some communication standards allow devices to add specific lower layer (such as PHY, MAC, etc.) software components to their existing configuration. These are typically provided through so-called "RadioApps". Terminal devices with an established D2D link can be further configured to exchange information on the observed performance gains and performance/power consumption trade-offs related to specific "RadioApps". For example, a terminal device may observe performance gains at minimum power expense when using a "RadioApp" which improves, or in some cases optimizes, antenna selection in the given local radio environment. Then, the usage of such an App can be recommended to other terminal devices, for example, the "RadioApp" can directly be shared if the compatibility of the linked terminal devices allows for it.

FIG. **212** shows communication system **21200** for a terminal device in accordance with some aspects. It is appreciated that communication system **21200** is exemplary in nature and may be simplified for purposes of this explanation. While certain components of communication system **21200** are shown as individual components, it is appreciated that multiple components may be combined into one component with the function of each of its constituents. Similarly, each individual component of communication system **21200** may be split into two or more separate components.

It is further appreciated that aspects of communication system **21200** may overlap with components described in FIG. **192**. Communication system **21200** shows components to illustrate the application of the methods and processes described herein, and therefore, may not show all of the components of a vehicular terminal device.

Communication system **21200** may include antenna system **21202** configured to transmit and receive radio signals. In some aspects, antenna system **21202** may be one or more antennas configured in the manner of antenna system **19202** of terminal device **19102** in FIG. **192**.

Communication system **21200** may include transceiver **21204** configured to transmit and/or receive communications with external sources via wireless interfaces, e.g., LTE, Wi-Fi, D2D communications, etc. In some aspects, transceiver **21204** may be configured in the manner of RF transceiver **19204** of terminal device **19102** in FIG. **192**.

Communication system **21200** may further include processing module **21206**, including acquisition module **21208**, demodulation/channel estimation module **21210**, and interference mitigation module **21212**. In some aspects, one or more of processing module **21206**, acquisition module **21208**, demodulation/channel estimation module **21210**, and interference mitigation module **21212** may be structurally realized as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. In some aspects, one or more of processing module **21206**, acquisition module **21208**, demodulation/channel estimation module **21210**,

and interference mitigation module **19221**may be modem-layer components, such as components of a baseband modem in the manner of baseband modem **19206** of FIG. **192**.

Processing module **21206** is configured to transmit and receive data as radio signals via radio transceiver **21204** and antenna system **21202**. Processing module **21206** may transmit and receive the data on a logical software-level connection that relies on a radio access connection for low-layer transport.

Acquisition module **21208** is configured to acquire network information from both network access node and from at least one co-located terminal device via transceiver **21204**. The information acquired from the network access node is used by the demodulation/channel estimation module **21210** to, for example, calculate the CSI between the terminal device and the network access node at a particular time.

Demodulation/channel estimation module **21210** is configured to demodulate data received from the network access node and perform channel estimation based on the demodulated data. Demodulation/channel estimation module **21210** may be further configured to demodulate data (e.g., CSI reports) received from co-located terminal devices.

Interference mitigation module **21212** is configured to perform interference mitigation based on the channel estimation information from both the terminal device and channel information received from co-located terminal devices. For example, a terminal device may use a CSI report received from a co-located terminal device in order to determine the interference caused by the co-located device and use this information to mitigate interference between the terminal device and the network access node at a given moment in time.

It is appreciated that while depicted as separate components, two or more components may be implemented into a single module configured to perform the same function as the two or more modules. For example, demodulation/channel estimation module **21210** and interference mitigation module **21212** may be combined into a single module to perform the necessary procedures shown in time charts **20800** and **21000**. Similarly, one component may be split into two or more components.

FIG. **213** shows method **21300** of performing radio communications at a terminal device in accordance with some aspects. As shown in FIG. **213**, method **21300** includes receiving, from a proximate terminal device on a device-to-device (D2D) link, shared radio channel information that characterizes a radio downlink radio channel for a network access node that the terminal device is connected to (**21310**), applying the shared radio channel information and local radio channel information to obtain a joint radio channel information at **(21320),** and receiving downlink data from the network access node based on the joint radio channel information (**21330**).

FIG. **214** shows method **21400** of performing radio communications at a terminal device in accordance with some aspects. As shown in FIG. **214**, method **21400** includes receiving, from a proximate terminal device on a device-to-device (D2D) link, shared radio channel information that characterizes a downlink radio channel of a first network access node that is causing interference to the terminal device (**21410**), receiving downlink data from a second network access node (**21420**), and performing interference cancellation on the downlink data based on the shared radio channel information (**21430**).

FIG. **215** shows method **21500** of performing radio communications at a terminal device in accordance with some aspects. As shown in FIG. **215**, method **21500** includes identifying a proximate terminal device as part of a device-to-device (D2D) discovery procedure (**21510**), receiving, on a D2D link, a device knowledge history class from the proximate terminal device that indicates a geographic range for which the proximate terminal device has communication information or a quantity of radio access technologies for which the proximate terminal device has communication information (**21520**), and deciding whether to request communication information from the proximate terminal device based on the device knowledge history class (**21530**).

## 7 Hierarchical Communication

As used herein, the term "Device-to-Device" (D2D) protocol may refer to any type of communication protocols (including existing, emerging, and future protocols) between two or more devices. Furthermore, the use of D2D herein generally refers to communication between any type of devices (including e.g., vehicles, drones, Internet of Things (IoT) devices), which in some aspects may not be explicitly defined in the D2D protocol. The term D2D may therefore apply to any of device-to-device, vehicle-to-vehicle communication, drone-to-drone communication, device-to-vehicle communication, device-to-drone communication, and vehicle-to-drone communication.

Although a number of specific protocols have emerged, or are emerging, with respect to communication between devices, the aspects detailed herein (e.g., opportunistic side-channel transmission for vehicles and drones) is not limited to a specific communications protocol, but rather spans a wide array of communications protocols. The aspects detailed herein may be used, without limitation, with D2D, device-to-infrastructure (D2I), device-to-everything (D2X), vehicle-to-vehicle (V2V), vehicle-to-infrastructure (V2I), vehicle-to-network (V2N), vehicle-to-everything (V2X), and with other communications protocols that are likely to emerge in the future. It is specifically anticipated that the aspects detailed herein may be used with current and/or future protocols related to communication between drones, or communication between a drone and a device, or a drone and a network. To the extent that any one of the above protocols is referenced in this disclosure, it is expressly anticipated that the method, apparatus, means, or principles discussed herein can be used with any other of the above protocols.

Recent developments in radio technology have brought forth a wide range of new radio connectivity applications in a variety of devices. For example, in addition to radio connectivity for user devices such as cell phones, tablets, and laptops, there has been a recent emergence of connectivity implementations in a wide range of devices from wearable devices and accessories (e.g., smart watches, fitness trackers, smart glasses) to home and consumer appliances (e.g., smart thermostats, refrigerators, security systems) to vehicles (e.g., autonomous vehicles, drones). These new types of connected devices have also introduced new concepts in inter-device communications. Accordingly, in addition to the terminal device-to-network radio links, a variety of different technologies related to device-to-device (D2D) communications have emerged to provide different ways of connecting devices to communicate and interact with one another. These D2D communications have also produced a wide range of possibilities regarding different hierarchies of communication devices, including relaying and extension of network coverage using intermediate hierarchical levels of devices. These aspects, e.g., hierarchical communications, etc., may be used with common channel aspects, e.g., a common channel instrumental in dynamically coordinating hierarchical communication structures, or may be used with power efficiency aspects, e.g., selecting the hierarchical communication structure to required device or network power efficiency levels, or may be used with enhanced communication aspects, e.g., selecting the hierarchical communication structure according to radio environment map (REM) information, or may be used with device cooperation aspects, e.g., selecting the hierarchical communication structure according to available D2D or V2V links.

FIG. **216** shows radio communication network **21600** in accordance with some aspects, which may include terminal devices **21602** and **21604** in addition to network access nodes **21610** and **21612**. Although certain aspects of this disclosure may describe certain radio communication network applications (such as an LTE, UMTS, GSM, other 3rd Generation Partnership Project (3GPP) networks, WLAN/Wi-Fi, Bluetooth, 5G, mmWave, device-to-device (D2D), etc.), the subject matter detailed herein is considered demonstrative in nature and may therefore be analogously applied to any other radio communication network. The number of network access nodes and terminal devices in radio communication network **21600** is exemplary and is scalable to any amount.

Accordingly, in an exemplary cellular setting, network access nodes **21610** and **21612** may be base stations (e.g., eNodeBs, NodeBs, Base Transceiver Stations (BTSs), etc.) while terminal devices **21602** and **21604** may be cellular terminal devices (e.g., Mobile Stations (MSs), User Equipment (UEs), etc.). Network access nodes **21610** and **21612** may therefore interface (e.g., via backhaul interfaces) with a cellular core network such as an Evolved Packet Core (EPC, for LTE), Core Network (CN, for UMTS), or other cellular core network, which may also be considered part of radio communication network **21600**. The cellular core network may interface with one or more external data networks. In an exemplary short-range setting, network access node **21610** and **21612** may be access points (APs, e.g., WLAN or Wi-Fi APs) while terminal device **21602** and **21604** may be short range terminal devices (e.g., stations (STAs)). Network access nodes **21610** and **21612** may interface (e.g., via an internal or external router) with one or more external data networks.

Network access nodes **21610** and **21612** (and other network access nodes of radio communication network **21600** not explicitly shown in FIG. **216**) may accordingly provide a radio access network to terminal devices **21602** and **21604** (and other terminal devices of radio communication network **21600** not explicitly shown in FIG. **216**). In an exemplary cellular setting, the radio access network provided by network access nodes **21610** and **21612** may enable terminal devices **21602** and **21604** to wirelessly access the core network via radio communications. The core network may provide switching, routing, and transmit for traffic data related to terminal devices **21602** and **21604** and may provide access to various internal (e.g., control nodes, other terminal devices on radio communication network **21600**, etc.) and external data networks (e.g., data networks providing voice, text, multimedia (audio, video, image), and other Internet and application data). In an exemplary short-range setting, the radio access network provided by network access nodes **21610** and **21612** may provide access to internal (e.g., other terminal devices connected to radio communication network **21600**) and external data networks (e.g., data networks providing voice, text, multimedia (audio, video, image), and other Internet and application data).

The radio access network and core network (if applicable) of radio communication network **21600** may be governed by network protocols that may vary depending on the specifics of radio communication network **21600**. Such network protocols may define the scheduling, formatting, and routing of both user and control data traffic through radio communication network **21600**, which includes the transmission and reception of such data through both the radio access and core network domains of radio communication network **21600.** Accordingly, terminal devices **21602** and **21604** and network access nodes **21610** and **21612** may follow the defined network protocols to transmit and receive data over the radio access network domain of radio communication network **21600** while the core network may follow the defined network protocols to route data within and outside of the core network. Exemplary network protocols include LTE, UMTS, GSM, WiMAX, Bluetooth, Wi-Fi, mmWave, etc., any of which may be applicable to radio communication network **21600.**

FIG. **217** shows an exemplary internal configuration of terminal device **21602** in accordance with some aspects, which may include antenna system **21702**, radio frequency (RF) transceiver **21704**, baseband modem **21706** (including physical layer processing module **21708** and controller **21710**), application processor **21712**, memory **21714**, and power supply **21716**. Although not explicitly shown in FIG. **217**, terminal device **21602** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identify module(s) (SIMs), user input/output (I/O) devices (display(s), keypad(s), touchscreen(s), speaker(s), external button(s), camera(s), microphone(s), etc.), etc.

In an abridged operational overview, terminal device **21602** may transmit and receive radio signals on one or more radio access networks. Baseband modem **21706** may direct such communication functionality of terminal device **21602** according to the communication protocols associated with each radio access network, and may execute control over antenna system **21702** and RF transceiver **21704** in order to transmit and receive radio signals according to the formatting and scheduling parameters defined by each communication protocol. Although various practical designs may include separate communication components for each supported radio access technology (e.g., a separate antenna, RF transceiver, physical layer processing module, and controller), for purposes of conciseness the configuration of terminal device **21602** shown in FIG. **217** depicts only a single instance of each such components.

Terminal device **21602** may transmit and receive radio signals with antenna system 21702, which may be a single antenna or an antenna array including multiple antennas and may additionally include analog antenna combination and/or beamforming circuitry. In the receive path (RX), RF transceiver **21704** may receive analog radio frequency signals from antenna system **21702** and perform analog and digital RF front-end processing on the analog radio frequency signals to produce digital baseband samples (e.g., In-Phase/Quadrature (IQ) samples) to provide to baseband modem **21706**. RF transceiver **21704** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples.

In the transmit path (TX), RF transceiver **21704** may receive digital baseband samples from baseband modem **21706** and perform analog and digital RF front-end processing on the digital baseband samples to produce analog radio frequency signals to provide to antenna system **21702** for wireless transmission. RF transceiver **21704** may thus include analog and digital transmission components including amplifiers (e.g., a Power Amplifier (PA)), filters, RF modulators (e.g., an RF IQ modulator), and digital-to-analog converters (DACs) to mix the digital baseband samples received from baseband modem **21706** to produce the analog radio frequency signals for wireless transmission by antenna system **21702**. Baseband modem **21706** may control the RF transmission and reception of RF transceiver **21704**, including specifying the transmit and receive radio frequencies for operation of RF transceiver **21704**.

As shown in FIG. **217**, baseband modem **21706** may include physical layer processing module **21708**, which may perform physical layer (PHY, or Layer 1) transmission and reception processing to prepare outgoing transmit data provided by controller **21710** for transmission via RF transceiver **21704** and prepare incoming received data provided by RF transceiver **21704** for processing by controller **21710**. Physical layer processing module **21708** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Although not explicitly shown in FIG. **217**, physical layer processing module **21708** may include a physical layer controller configured to control various hardware and software processing components of physical layer processing module **21708** in accordance with physical layer control logic defined by the communications protocol for the relevant radio access technologies. Furthermore, while physical layer processing module **21708** is depicted as a single component in FIG. **217**, physical layer processing module **21708** may include separate sections of physical layer processing components where each respective section is dedicated to the physical layer processing of a particular radio access technology.

Terminal device **21602** may be configured to operate according to one or more radio access technologies, which may be directed by controller **21710**. Controller **21710** may thus be configured to control the radio communication components of terminal device **21602** (e.g., antenna system **21702**, RF transceiver **21704**, and physical layer processing module **21708**) in accordance with the communication protocols of one or more supported radio access technologies. Also, controller **21710** may be configured to represent the Access Stratum and Non-Access Stratum (NAS) (also encompassing Layer 2 and Layer 3) of one or more supported radio access technologies. Controller **21710** may be structurally embodied as a protocol processor configured to execute protocol software (retrieved from a controller memory) and subsequently control the radio communication components of terminal device **21602** in order to transmit and receive communication signals in accordance with the corresponding protocol control logic defined in the protocol software.

Controller **21710** may therefore be configured to manage the radio communication functionality of terminal device **21602** in order to communicate with the various radio and core network components of radio communication network **21600**. Controller **21710** may also be configured according to the communication protocols for multiple radio communication networks.

In some aspects, controller **21710** may be configured according to multiple cellular radio communication technologies, for example, according to LTE, UMTS, and/or GSM. In some aspects, controller **21710** may be configured according to cellular radio communication technologies and short-range radio communication technologies, such as, for example, at least one of Wi-Fi or Bluetooth and at least one of LTE, UMTS, or GSM. Controller **21710** may either be a unified controller that is collectively responsible for all supported radio access technologies (e.g., LTE, UMTS, GSM, Bluetooth, Wi-Fi, etc.) or may include multiple separate controllers where each controller is a dedicated controller for a particular radio access technology (e.g., a dedicated LTE controller, a dedicated UMTS controller, a dedicated GSM controller, a dedicated Wi-Fi controller, a dedicated Bluetooth controller). Regardless, controller **21710** may be responsible for directing radio communication activity of terminal device **21602** according to the communication protocols of the supported radio communication networks.

As previously noted regarding physical layer processing module **21708**, one or both of antenna system **21702** and RF transceiver **21704** may similarly be partitioned into multiple dedicated components that each respectively correspond to one or more of the supported radio access technologies. Depending on the specifics of each such configuration and the number of supported radio access technologies, controller **21710** may be configured to control the radio communication operations of terminal device **21602** in accordance with a master/slave RAT hierarchical or multi-SIM scheme.

Terminal device **21602** may also include application processor **21712**, memory **21714**, and power supply **21712**. Application processor **21712** may be a CPU configured to execute various applications and/or programs of terminal device **21602** at an application layer of terminal device **21602**, such as an Operating System (OS), a User Interface (UI) for supporting user interaction with terminal device **21602**, and/or various user applications. The application processor **21712** may interface with baseband modem **21706** as an application layer to transmit and receive user data such as voice data, audio/video/image data, messaging data, application data, basic Internet/web access data, etc., over the radio access connection(s) provided by baseband modem **21706**. Although shown separately in FIG. **217**, this distinction highlights the differences between baseband modem **21706** and application processor **21712** on a functional level. Accordingly, in some aspects baseband modem **21706** and application processor **21712** may be structurally separate, e.g., a separate baseband modem **21706** and a separate application processor **21712**. In some aspects, baseband modem **21706** and application processor **21712** may be structurally integrated, such as an integrated baseband modem/application processor **21706/21712**.

Memory **21714** may embody a memory component of terminal device **21602**, such as a hard drive or another such memory device. Although not explicitly depicted in FIG. **217**, the various other components of terminal device **21602** shown in FIG. **217** may additionally each include integrated permanent and non-permanent memory components, such as for storing software program code, buffering data, etc.

Power supply **21716** may be an electrical power source that provides power to the various electrical components of terminal device **21602**. Depending on the design of terminal device **21602**, power supply **21716** may be a 'finite' power source such as a battery (rechargeable or disposable) or an 'indefinite' power source such as a wired electrical connection. Operation of the various components of terminal device **21602** may thus pull electrical power from power supply **21716.**

In accordance with radio communication networks, terminal devices **21602** and **21604** may execute mobility procedures to connect to, disconnect from, and/or switch between available network access nodes of the radio access network of radio communication network **21600.** As each network access node of radio communication network **21600** may have a specific coverage area, terminal devices **21602** and **21604** may be configured to select and re-select between the available network access nodes in order to maintain a strong radio access connection with the radio access network of radio communication network **21600.** For example, terminal device **21602** may establish a radio access connection with network access node **21610** while terminal device **21604** may establish a radio access connection with network access node **21612.** In the event that the current radio access connection degrades, terminal devices **21602** or **21604** may seek a new radio access connection with another network access node of radio communication network **21600.** For example, terminal device **21604** may move from the coverage area of network access node **21612** into the coverage area of network access node **21610.** As a result, the radio access connection with network access node **21612** may degrade, which terminal device **21604** may detect via radio measurements such as signal strength or signal quality measurements of network access node **21612.**

Depending on the mobility procedures defined in the appropriate network protocols for radio communication network **21600,** terminal device **21604** may seek a new radio access connection (which may be triggered at terminal device **21604** or by the radio access network), such as by performing radio measurements on neighboring network access nodes to determine whether any neighboring network access nodes can provide a suitable radio access connection. As terminal device **21604** may have moved into the coverage area of network access node **21610,** terminal device **21604** may identify network access node **21610** (which may be selected by terminal device **21604** or selected by the radio access network) and transfer to a new radio access connection with network access node **21610.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

FIG. **218** shows an exemplary internal configuration of a network access node such as network access node **21610** in accordance with some aspects. As shown in FIG. **218,** network access node **21610** may include antenna system **21802,** radio module **21804,** communication module **21806** (including, for example, physical layer module **21808** and control module **21810**), and backhaul interface **21812.** In an abridged overview of the operation of network access node **21610,** network access node **21610** may transmit and receive radio signals via antenna system **21802,** which may be an antenna array including one or more antennas. Radio module **21804** may perform transmit RF processing in order to convert outgoing digital data from communication module **21806** into analog RF signals to provide to antenna system **21802** for radio transmission. Radio module **21804** may also perform receive RF processing in order to convert incoming analog RF signals received from antenna system **21802** into digital data to provide to communication module **21806.**

Physical layer module **21808** may be configured to perform physical layer reception processing on digital data received from radio module **21804** to provide to control module **21810** and to perform physical layer transmission processing on digital data received from control module **21810** to provide to radio module **21804.** Control module **21810** may control the communication functionality of network access node **21610** according to the corresponding radio access protocols, such as UMTS, LTE, and LTE-A, which may include exercising control over antenna system **21802,** radio module **21804,** and physical layer module **21808.**

In some aspects, each of radio module **21804,** physical layer module **21808,** and control module **21810** may be structurally realized as a hardware-defined module, for example, as one or more dedicated hardware circuits or FPGAs, as a software-defined module, for example, as one or more processors executing program code that define arithmetic, control, and I/O instructions (e.g., software and/or firmware) stored in a non-transitory computer-readable storage medium, or as a mixed hardware-defined and software-defined module. In some aspects, radio module **21804** may be a radio transceiver including digital and analog radio frequency processing and amplification circuitry. In some aspects, radio module **21804** may be a software-defined radio (SDR) component implemented as a processor configured to execute software-defined instructions that specify radio frequency processing routines. In some aspects, physical layer module **21808** may include a processor and one or more hardware accelerators, wherein the processor is configured to control physical layer processing and offload certain processing tasks to the one or more hardware accelerators. In some aspects, control module **21810** may be a controller configured to execute software-defined instructions that specify upper-layer control functions. In some aspects, control module **21810** may be limited to radio communication protocol stack layer functions, while in other aspects control module **21810** may also be responsible for transport, internet, and application layer functions.

Network access node **21610** may interface with a core network and/or internet networks (directly/via a router or via the core network), which may be through a wired or wireless interface. Network access node **21610** may also interface with other network access nodes over a wired or wireless interface. Network access node **21610** may thus provide the functionality of network access nodes in radio communication networks by providing a radio access network to enable served terminal devices to access desired communication data.

Radio communication networks may be highly dynamic due to a variety of factors that impact radio communications. For example, terminal devices **21602** and **21604** may move (e.g., by a user) to various different positions relative to network access nodes **21610** and **21612,** which may affect the relative distances and radio propagation channels between terminal devices **21602** and **21604** and network access node **21610** and **21612.** The radio propagation channels may also vary due to factors unrelated to mobility such as interference, moving obstacles, and atmospheric changes. Additionally, local conditions at terminal device **21602** and **21604,** such as battery power, the use of multiple radio access technologies, varying user activity and associated data traffic demands, etc., may also impact radio communication. Radio communications may also be affected by conditions at network access nodes **21610** and **21612** in addition to the underlying core network, such as network load and available radio resources.

As previously indicated, in some aspects network access nodes **21610** and **21612** may interface with a core network. FIG. **219** shows an exemplary configuration in accordance with some aspects where network access node **21610** interfaces with core network **21902,** which may be a cellular core network. Core network **21902** may provide a variety of functions essential to operation of radio communication network **21600,** such as data routing, authenticating and managing users/subscribers, interfacing with external networks, and various network control tasks. Core network **21902** may therefore provide an infrastructure to route data between terminal device **21602** and various external networks such as data network **21904** and data network **21906.** Accordingly, terminal device **21602** may rely on the radio access network provided by network access node **21610** to wirelessly transmit and receive data with network access node **21610,** which may then provide the data to core network **21902** for further routing to external locations such as data networks **21904** and **21906** (which may be packet data networks (PDNs)). Terminal device **21602** may therefore establish a data connection with data network **21904** and/or data network **21906** that relies on network access node **21610** and core network **21902** for data transfer and routing.

7.1 Hierarchical Communication #1

In some aspects, D2D communications may provide direct communication between terminal devices or users without the necessity of communicating through network access nodes and core networks. This is a marked departure from a traditional radio communication network, where communication between terminal devices is generally routed through a radio access network and core network, regardless of range or potential for wireless link between the terminal devices. Conversely, in the setting of D2D communications multiple terminal devices can communicate directly with each other, thus avoiding any routing through the radio access or core network.

Furthermore, when wireless communication networks were primarily voice-call based, a terminal device primarily communicated with other terminal devices that were not located in close proximity to one another. However, modern wireless communications have introduced new use cases for data exchange between terminal devices, conceivably even between terminal devices that are in close proximity to each other. In this environment, the ability to share information directly between terminal devices fulfills the demand for data sharing while easing the corresponding burden on the network. Moreover, where terminal devices in close proximity transmit in a D2D communication, high data rates can often be achieved at lower power levels compared to the power levels necessary for uplink and downlink communications with network access nodes.

In 5G and other emerging radio access technologies, wireless transmission is likely to occur on shorter wavelengths than those used in other radio access technologies such as LTE. These shorter wavelengths can include millimeter wavelengths, such as in the case of mmWave. Although millimeter wavelengths may provide higher data rates than longer wavelengths, millimeter wavelengths are subject to outage, due to the physical properties of millimeter wavelengths, resulting poor coverage, or the presence of nearby blockers.

The problem of outage may be particularly acute in V2I and V2V applications in which vehicular terminal devices may transmit and receive data with radio access infrastructure and/or with other network locations further downstream. The high mobility involved in V2I and V2V applications may lead to scenarios where vehicular terminal devices may enter areas of poor signal coverage or areas where the signal is obstructed or blocked. However, when a vehicular terminal device experiences poor coverage or poor signal with respect to the base station or network, it may be possible for the vehicular terminal device to have appreciably better coverage or signal strength with respect to a second vehicular terminal device.

In a first hierarchical communication system of this disclosure, relaying vehicular terminal devices, such as a vehicle or a drone, can be utilized opportunistically to improve overall link quality and thus the reliability of V2I or D2I links. For example, a vehicular terminal device can be configured to interact with one or more other vehicular terminal devices via D2D communications in order to discover nearby vehicular terminal devices and evaluate the link quality of the D2D sidelink channels between the nearby vehicular terminal devices to obtain link quality measurements. One or more of the vehicular terminal devices may then report the link quality measurements to a network access node. The network access node may then evaluate the link quality measurements to schedule uplink and downlink channels for the vehicular terminal devices, some of which may include D2D sidelink channels as part of the uplink and downlink channels via relaying. Accordingly, some aspects may involve cooperation between vehicular terminal devices and network access nodes in order to identify suitable uplink and downlink interfaces for vehicular terminal devices. Some aspects may also utilize other terminal devices as part of the D2D links, such as for D2D links between vehicles and other terminal devices.

This D2D relaying assistance for V2I/V2N links may improve cell-edge throughput performance through an opportunistic use of D2D sidelink channels, even when the sidelink channels are also being used for device to infrastructure links. The sidelink channel communication may be carried over licensed or unlicensed frequencies. These frequencies for sidelink channel communication are not limited in wavelength and may be transmitted on any wavelength suitable for the relevant installation.

The first hierarchical communication system may use a vehicular terminal device as relay. In some aspects, the use of a vehicular terminal device, such as a vehicle or a drone, as a relay may be advantageous compared to the use of opportunistic side-channel transmission through a wireless phone or other UE. In particular, opportunistic side-channel transmission through a wireless phone may present challenges related to the device power budget or an incentive to cooperate. These problems can be greatly mitigated with vehicular terminal devices. With respect to battery life, vehicular terminal devices may have battery resources well in excess of a cellular phone or other common user device. Vehicular terminal devices may also have engines or fuel cells that result in the local creation of electric current, or even the ability to locally recharge batteries. They may also be fitted with solar cells that are capable of powering the device or storing energy in batteries for later use. With these power-related advantages in vehicular terminal devices, they are particularly well-suited for opportunistic side-channel transmission, compared to cellular phones. At least because of the more robust power-resources, vehicular terminal devices may be more willing or able to cooperate in opportunistic side-channel transmission than cellular phones. There may be various important considerations in the use of terminal devices for relaying. For example, terminal device relaying may introduce additional latency. This may be solved by separating services in the hierarchical network architecture, and then only using terminal device relaying for latency-tolerant services such as IoT services. Terminal device relay may also require high processing power in the relaying devices. This may be addressed by dynamically selecting the relaying device based on certain KPI parameter measurements, and only selecting 'strong' terminals (e.g., with good remaining battery status, good channel conditions) as relays.

FIGs. **220** and **221** show exemplary scenarios illustrating an operation of the first hierarchical communication system in accordance with some aspects. As shown in the exemplary scenario of FIG. **220,** network access node **22001** may provide a radio access network to proximate terminal devices including vehicular terminal devices **22003** and **22008-22010** in addition to terminal device **22002.** Vehicular terminal device **22003** and **22008-22010** may be any type of vehicular node, including, for example, a motor-vehicle, a non-motor-vehicle, or a drone.

As shown in FIG. **220,** network access node **22001** may transmit downlink data to vehicular terminal devices **22008-22009** via main downlink channel **22005,** which may be a direct path between network access node **22001** and vehicular terminal devices **22008-22010.** Vehicular terminal devices **22008-22010** may then transmit uplink data to network access node **22001** via the reverse path of main downlink channel **22005** (not explicitly denoted in FIG. **220**). The communications between vehicular terminal devices **22008-22010** and network access node **22001** may be characterized as V2I and/or V2N. Accordingly, in some aspects of a V2I setting, network access node **22001** may be a roadside equipment that handles local communication and control, such as a stoplight or other roadside infrastructure that handles communication, integration, and movement control locally between traveling vehicles. In some aspects of a V2N setting, network access node **22001** may interface with external data networks (e.g., via a core network) to provide internet and cloud services.

As indicated above, the first hierarchical communication system may utilize sidelink channels between vehicular terminal devices and/or terminal devices to improve uplink and downlink channels, for example, to realize relaying uplink and/or downlink channels that utilize sidelink channels. Accordingly, vehicular terminal device **22003** may not utilize main uplink channel **22007** to transmit uplink data to network access node **22001.** As shown in FIG. **220,** vehicular terminal device **22003** may instead utilize sidelink channel **22006** to transmit uplink data to terminal device **22002,** which may then relay the uplink data to network access node **22001** on main uplink channel **22004.** Accordingly, vehicular terminal device **22003** may utilize D2D relaying (e.g., D2D cooperation) to transmit uplink data to network access node **22001** via another terminal device, for example, on a relaying uplink channel that includes a sidelink channel. The uplink channel between vehicular terminal device **22003** and network access node **22001** may therefore be a relaying uplink channel including sidelink channel **22006** and uplink channel **22004** of terminal device **22002.** The components FIG. **220** may therefore utilize D2D sidelink assistance to perform V2I or V2N communications.

FIG. **221** depicts another exemplary scenario of the first hierarchical communication system in accordance with some aspects. As shown in FIG. **221,** network access node **22001** may transmit downlink data to terminal device **22002** on a relaying downlink channel that includes multiple sidelink channels. Accordingly, instead of using main downlink channel **22105** to transmit to terminal device **22002,** network access node **22001** may utilize downlink channel **22101** and a sequence of sidelink channels **22102, 22103,** and **22104** between vehicular terminal devices **22008, 22009,** and **22010** to transmit downlink data to terminal device **22002.** Accordingly, in some aspects, network access node **22001** may utilize a plurality of sidelink channels to complete a relaying downlink channel. The D2D sidelink assistance shown in FIG. **221** may be applied for V2I or V2N communications. The scenarios shown in FIGs. **220** and **221** are exemplary in nature. The number of sidelink channels utilized in D2D sidelink assistance may be scalable to any number, and may be executed in the uplink and/or downlink directions. The sidelink channels utilized for D2D relaying assistance may be provided by any combination of terminal devices and vehicular terminal devices. Sidelinks may be used by different terminal devices, e.g., user equipment within a vehicle, a group of proximate vehicles, a group of proximate IoT devices, a group of implantable devices in a body, etc.

FIG. **222** shows an exemplary internal configuration of vehicular terminal device **22200** in accordance with some aspects. As shown in FIG. **222,** vehicular terminal device **21600** may include antenna system **22202,** RF transceiver **22204,** and processing module**22206** that includes discovery module **22208,** measurement module **22210,** and communication module **22212.** In some aspects, FIG. **222** may only depict the components of vehicular terminal device **22200** used in the setting of radio communications. Accordingly, in some aspects vehicular terminal device **22200** may be integrated into a vehicle and may also include vehicular components such as an engine, housing, vehicular electronics, a transmission, windows, doors, etc.

Vehicular terminal device **22200** may transmit and receive signals via antenna system **22202** and RF transceiver **22204,** which may be configured in the manner of antenna system **21702** and RF transceiver **21704** of terminal device **21602** as previously detailed regarding FIG. **217.** Processing module **22206** may the control radio communication functionality of vehicular terminal device **22200** at discovery module **22208,** measurement module **22210,** and communication module **22212.** In some aspects, processing module **22206** and/or one or more of discovery module **22208,** measurement module **22210,** and communication module **22212** may be realized as baseband modem and/or application layer components, and/or may be implemented as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

Discovery module **22208** may be configured to perform discovery (via antenna system **22202** and RF transceiver **22204**) in order to discover other terminal devices and vehicular terminal devices, such as in accordance with a D2D discovery procedure. In some aspects, discovery module **22208** may apply blind time and frequency synchronization and sidelink ID detection functionalities using predefined preambles, such as by detecting predefined preambles (e.g., a Primary Sidelink Synchronization Signal (PSSS) and Secondary Sidelink Synchronization Signal (SSSS)) in received radio signals. The predefined preambles may be predefined in a standard (e.g., LTE), and may thus be known *a priori* at discovery module **22208.** Measurement module **22210** may be configured to perform radio measurements (via antenna system **22202** and RF transceiver **22204**) on uplink and/or downlink channels and sidelink channels. In some aspects, measurement module **22210** may be configured to perform radio measurements on signals received on main uplink and/or downlink channels (from a network access node) and on signals received on sidelink channels (from other vehicular terminal devices) to obtain link quality measurements. In various aspects, the link quality measurements may be signal strength measurements, signal quality measurements, SNR measurements, SINR measurements, error rate measurements, or any other type of link quality measurement.

Communication module **22212** may be configured to control radio communication functions of vehicular terminal device **22200,** including triggering of discovery, measurement, transmission and reception control and timing, and mobility. Accordingly, communication module **22212** may be configured to consolidate the link quality measurements obtained by measurement module **22210** and report the link quality measurements to a network access node. Communication module **22212** may also be configured to transmit and receive signals (via RF transceiver **22204** and antenna system **22202**) on uplink, downlink, and sidelink channels in accordance with corresponding radio access protocols.

Accordingly, processing module **22206** can include a discovery module (**22208**), configured to determine one or more devices enabled for wireless communication within a proximity of a user equipment, a measurement module (**22210**), configured to determine a link quality for the one or more devices enabled for wireless communication, and a communication module (**22212**) configured to transmit the determined link quality for the one or more devices enabled for wireless communication, receive a transmission including a selected device enabled for wireless communication, and receive a scheduling protocol for transmission with the selected device, and transmit data to the selected device.

FIG. **223** shows an exemplary internal configuration of network access node **22300** in accordance with some aspects of the first hierarchical communication system. In various aspects, network access node **22001** may be configured in the manner of network access node **22300.** Network access node **22300** may transmit and receive signals via antenna system **22302** and radio module **22304,** which may be configured in the manner of antenna system **21802** and radio module **21804** of network access node **21610** as previously detailed regarding FIG. **217.** Processing module **22306** may control radio communication functionality of network access node **22300** at communication module **22308.**

In some aspects, processing module **22306** and/or communication module **22308** may be realized as baseband and/or application layer components, and/or may be implemented as a hardware-defined module, for example, as one or more dedicated circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. Communication module **22300** may be configured to perform one or more of D2D discovery scheduling, network assistance information provisioning, evaluation of link measurements for uplink, downlink, and sidelink channels, selection of uplink/downlink channels and channel scheduling, D2D pairing, and transmission and reception of downlink and uplink signals.

Accordingly, processing module **22306** includes a communication module (**22302**) configured to receive from a user equipment a link quality of one or more devices enabled for wireless transmission, select, from the one or more devices enabled for wireless transmission, a device for side channel transmission based on the link quality, and transmit to the user equipment and the selected device a schedule for side channel transmission.

FIG. **224** shows message sequence chart **22400** in accordance with some aspects. In some aspects, communication nodes operating in a V2I or V2N setting may apply the procedure of message sequence chart **22400** to utilize sidelink channels to improve a main channel, which may be a V2I or V2N downlink or uplink channel between a network access node and a terminal device. As indicated in FIG. **224,** vehicular terminal devices **22008, 22009,** and **22010** and network access node **22001** may execute the procedure of message sequence chart **22400.** However, the following description is demonstrative and may be analogously applied to other combinations of terminal devices, including any combination of vehicular and non-vehicular terminal devices. In some aspects, vehicular terminal devices **22008-22010** may be configured in the manner of vehicular terminal device **22200** as detailed regarding FIG. **222.** In some aspects, network access node **22001** may be configured in the manner of network access node **22300** as detailed regarding FIG. **223.**

Vehicular terminal devices **22008-22010** may first discover neighboring devices with available sidelink channels in **22402** (e.g., at a discovery module such as discovery module **22208** as shown in FIG. **222**)**.** In some aspects, vehicular terminal devices **22008-22010** may perform **22402** by performing D2D discovery, such as by monitoring sidelink channels (which may be assigned to specific frequencies) for D2D discovery signals. Vehicular terminal devices **22008-22010** may then identify any detectable D2D discovery signals and subsequently identify neighboring devices with available sidelink channels. For example, in an exemplary scenario, vehicular terminal devices **22008-22010** may be proximate to one another (e.g., in range of D2D discovery) and may detect one another in **22402.**

In various aspects, vehicular terminal devices **22008-22010** may utilize any inter-device radio access technology to discover neighboring devices with available sidelink channels in **22402.** For example, in various aspects, vehicular terminal devices **22008-22010** may utilize LTE Direct (e.g., over a PCS interface), LTE Proximity Services (ProSe), Dedicated Short-Range Communications (DSRC), WLAN/Wi-Fi (including Wi-Fi Direct), Bluetooth, mmWave, etc. In some aspects, one or more of vehicular terminal devices **22008-22010** may utilize multiple inter-device radio access technologies, and may perform discovery for a plurality of the multiple inter-device radio access technologies.

Additionally or alternatively, in some aspects, terminal devices **22008-22010** may discover neighboring devices in **22402** with network assistance provided by network access node **22001.** For example, network access node **22001** may provide information in **22402** that indicates neighboring devices, for example, may provide neighboring device information. For instance, network access node **22001** may provide neighboring device information to vehicular terminal device **22008** that vehicular terminal devices **22009** and **22010** are proximate (or expected to be proximate) to vehicular terminal device **22008.** Network access node **22001** may obtain such neighboring device information based on geolocation information and/or topology information for the vehicular terminal devices served by network access node **22001,** including vehicular terminal devices **22008-22010.** Vehicular terminal devices **22008-22010** may then utilize the neighboring device information to identify neighboring devices in **22402,** and may in some aspects also perform D2D discovery in **22402** in order to verify the neighboring device information (or may utilize the neighboring device information as a preliminary starting information for D2D discovery).

In some aspects, network access node **22001** may schedule **22402** as a 'neighbor discovery phase'. For example, network access node **22001** may transmit control information to vehicular terminal devices **22008-22010** that specifies that an upcoming time period (or periodically occurring time period) will be a neighbor discovery phase. Vehicular terminal devices **22008-22010** may then perform discovery during the neighbor discovery phase. In some cases, as vehicular terminal devices **22008-22010** may be simultaneously performing discovery in accordance with the neighbor discovery phase. This may increase the effectiveness of discovery and avoid missed connections.

After discovering neighboring devices with available sidelink channels in **22402,** vehicular terminal devices **22008-22010** may evaluate the available channels in **22404** (e.g., at a measurement module such as measurement module **22210** as shown in FIG. **222**)**.** More specifically, vehicular terminal devices **22008-22010** may evaluate available sidelink channels (e.g., with the neighboring devices discovered in **22402)** and main uplink and downlink channels with network access node **22001.** Accordingly, vehicular terminal devices **22008-22010** may perform radio measurements on the sidelink channels in **22404** in order to characterize the link quality of the sidelink channels. As previously indicated, vehicular terminal devices **22008-22010** may utilize any radio access technology for the sidelink channels, including LTE Direct, LTE ProSe, DSRC, WLAN/Wi-Fi, Bluetooth, mmWave, etc.

In some aspects, one or more of vehicular terminal devices **22008-22010** may perform radio measurements for sidelink channels of multiple radio access technologies. Accordingly, vehicular terminal devices **22008-22010** may consider sidelink channels for a plurality of radio access technologies.

Additionally, in some aspects terminal devices **22008-22010** may perform radio measurements on the main uplink and/or downlink channels in **22404,** which may include receiving signals from network access node **22001** (e.g., on the main downlink channel, an LTE-Uu interface) and performing radio measurements on the received signals. In exemplary cases where the main link between network access node and terminal devices **22008-22010** exhibits channel reciprocity (e.g., a time division duplexing (TDD) system), the radio measurements on the main downlink channel may reflect the link quality of both the main downlink and uplink channels.

Vehicular terminal devices **22008-22010** may then report the link quality measurements to network access node **22001** in **22406.** In various aspects, vehicular terminal devices **22008-22010** may utilize any radio access technology to report the link quality measurements to network access node **22001** in **22406,** including standard LTE (on the LTE-Uu interface), LTE Direct, LTE ProSe, DSRC, WLAN/Wi-Fi, Bluetooth, or mmWave. In some aspects, one or more of vehicular terminal devices **22008-22010** may utilize a sidelink channel (e.g., with another of vehicular terminal devices **22008-22010**) to transmit the link quality measurements to network access node **22001** via a relaying link.

Network access node **22001** may then receive the link quality measurements and evaluate the link quality measurements in **22408** (e.g., at a communication module such as communication module **22308** as shown in FIG. **223**)**.** In particular, network access node **22001** may determine which uplink and downlink channels to schedule for V2I/V2N communications between network access node **22001** and vehicular terminal devices **22008-22010,** where uplink and/or downlink channels may include a sidelink channel as part of the uplink or downlink channel path (e.g., relaying channels), and other uplink and/or downlink channels may be direct paths, (e.g., main channels). As some of the uplink and/or downlink channels may be relaying channels that utilize sidelink channels, network access node **22001** may also determine which vehicular terminal devices to schedule as D2D pairs in **22408** as part of any relaying uplink and/or downlink channels.

Network access node **22001** may therefore select uplink and downlink channels to schedule for vehicular terminal devices **22008-22010** for V2I/V2N communications in **22408.** While in a scenario network access node **22001** may simply use the main uplink and downlink channels (e.g., the direct uplink and downlink paths between vehicular terminal devices **22008-22010** and network access node **22001**), network access node **22001** may consider additional options for uplink and downlink channels that include sidelink channels in addition to the main uplink and downlink channels.

In some aspects, network access node **22001** may apply utility maximization techniques to identify which uplink or downlink channels (potentially including sidelink channels) provide optimal downlink and uplink paths for vehicular terminal devices. For example, in an exemplary application of message sequence chart **22400** to the vehicular terminal device **22003** in FIG. **220,** vehicular terminal device **22003** may discover terminal devices **22002** during discovery in **22402,** evaluate the sidelink channel (over path **22006**) and the main uplink and downlink channels (over path **22007**) to obtain link quality measurements in **22404,** and report the link quality measurements to network access node **22001** in **22406.** Terminal device **22002** may similarly evaluate the sidelink channel (over path **22006**) and the main uplink and downlink channels (over path **22004**) to obtain link quality measurements in **22404** and report the link quality measurements to network access node **22001** in **22406.** In various aspects, the link quality measurements may be signal strength measurements, signal quality measurements, SNR measurements, SINR measurements, error rate measurements, or any other type of link quality measurement.

Network access node **22001** may then evaluate the link quality measurements to evaluate the potential uplink and downlink channels in accordance with utility maximization in **22408,** for instance, to identify which uplink and downlink channel (e.g., the utility) improves the link performance (e.g., the maximization parameter, the link with the highest throughput, the link with the lowest error rate, etc.). For example, network access node **22001** may consider the main uplink and downlink channels (over path **22007**) and the uplink and downlink channels that utilize the sidelink channel (over path **22006**) (where these uplink and downlink channels may be relaying channels that include the sidelink channel over path **22006** and the main uplink/downlink channel over path **22004**) in order to schedule an uplink and downlink channel for vehicular terminal device **22003** to use for V2I/V2N communications. Accordingly, network access node **22001** may compare the link quality measurements for the main uplink/downlink channel for vehicular terminal device **22003** (path **22007**), the sidelink channel (path **22006**), and the main uplink/downlink channel for terminal device **22003** (path **22004**) to determine which potential uplink and/or downlink channel improves the link performance.

For example, network access node **22001** may determine in **22408** that the link quality measurements indicate that the main downlink channel on path **22007** provides better link performance than the relaying downlink channel via paths **22004** and **22006** that utilizes relaying. However, network access node **22001** may determine in **22408** that the link quality measurements indicate that the relaying uplink channel via **22006** and **22004** provides better link performance than the main uplink channel over path **22007**. Network access node **22001** may therefore select the main downlink channel on path **22007** as the downlink channel for vehicular terminal device **22003** and the relaying channel over paths **22006** and **22004** as the uplink channel for vehicular terminal device **22003,** e.g., a relaying uplink channel that includes a sidelink channel

In some aspects, network access node **22001** may utilize proportionally fair throughput (e.g., an acceptable tradeoff between overall throughput and minimal service for individual users) as the link performance parameter that is maximized via the utility maximization analysis. In other words, network access node **22001** may perform scheduling and D2D pairings based on fairly balancing service between the terminal devices, e.g., such that certain terminal devices do not unfairly experience higher throughput or latency than other terminal devices. For example, network access node **22001** may consider that utilizing vehicular terminal devices for relaying may skew the data throughput to the vehicular terminal devices, and may cause imbalances where some vehicular terminal devices enj oy higher throughput than others due to the relaying channels. Accordingly, in some aspects, network access node **22001** may evaluate the link quality measurements in **22408** to schedule uplink and/or downlink channels that maximize proportional fair throughput (e.g., a link with good quality could be used to provide minimal but guaranteed services to users, while a link with not so good quality could be used to opportunistically maximize overall throughput). Network access node **22001** may therefore evaluate the potential uplink and downlink channels in a joint procedure that considers the impacts of using sidelink channels for relaying on throughput to the other vehicular terminal devices.

In some aspects, network access node **22001** may also consider relaying strategies in scheduling uplink and/or downlink channels in **22408.** For example, there may be different relaying strategies available for D2D pairings, including amplify-and-forward, decode-and-forward, compress-and-forward, or quantize-map-and-forward (which are available for use in order to exchange received signals between D2D pairs for proper MIMO processing). The various relaying strategies may provide different performance levels and/or have different requirements (e.g., for synchronization or device capabilities). In some aspects, vehicular terminal devices **22008-22010** may provide information to network access node **22001** that indicates their capabilities (e.g., in **22406** or another reporting stage), e.g., may provide their relaying capabilities for D2D (V2V) cooperation as device capability signaling. Network access node **22001** may also consider the impact of the relaying strategies as part of the utility maximization analysis, and may schedule relaying uplink and/or downlink channels with a specific relaying strategy (e.g., a relaying strategy with many hops might have negative impacts on latency-critical services and the utility maximization analysis).

As previously indicated, in some aspects, one or more of vehicular terminal devices **22008-22010** may support sidelink channels for multiple radio access technologies, e.g., multiple of LTE Direct, LTE ProSe, DSRC, WLAN/Wi-Fi, Bluetooth, or mmWave, and may provide link quality measurements for sidelink channels of multiple radio access technologies in **22406.** In some aspects, network access node **22001** may therefore evaluate potential sidelink channels for multiple different radio access technologies and, if a given D2D sidelink between a pair of vehicular terminal devices is available in multiple radio access technologies, may select a radio access technology for the sidelink channel.

Network access node **22001** may therefore apply a utility maximization analysis to vehicular terminal devices **22008-22010** in **22408** based on the link quality measurements. Accordingly, network access node **22001** may consider the sidelink channels as part of potential relaying channels in addition to the main uplink and downlink channels for channel selection in **22408** (e.g., as part of utility maximization analysis). Network access node **22001** may therefore select uplink and downlink channels to schedule for vehicular terminal devices **22008-22010** in **22408,** which may include consideration of proportional fair throughput, relaying strategies, and/or sidelink channel radio access technologies (e.g., a video streamed to a vehicular terminal device might result in the selection of a more low-latency low-throughput uplink channel and a high-latency high-throughput multi-relay downlink channel).

In some aspects, network access node **22001** may treat one or more D2D pairs as a MIMO link with appropriate modification of the rate to address non-collocated antennas. Although pairs of D2D collaborators (e.g., relaying channels that utilize one or more sidelink channels) may be common, network access node **22001** may also schedule links of D2D collaborators that include more than two terminal devices.

After evaluating the uplink and/or downlink channels and determining the scheduling in **22408,** network access node **22001** may provide the scheduling to vehicular terminal devices **22008-22010** in **22410.** As some of the scheduled uplink and downlink may be relaying channels and include sidelink channels, network access node **22001** may also organize the corresponding D2D pairings (e.g., V2V pairing) in **22410** by providing D2D pairing information that identifies the sidelink channel configuration. The D2D pairing information may identify which of vehicular terminal devices **22008-22010** are to form D2D pairs, the relaying strategy for the D2D pairing, and the radio access technology for the D2D pairing.

Vehicular terminal devices **22008-22010** may then apply the D2D pairings in **22412** (e.g., at a communication module such as communication module **22212** as shown in FIG. **222**) to realize the uplink and/or downlink channels scheduled by network access node **22001.** Depending on the scheduling identified by network access node **22001** in **22408,** some of vehicular terminal devices **22008-22010** may utilize main downlink and/or uplink channels (e.g., direct paths with network access nodes **22001**) while others of vehicular terminal devices **22008-22010** may utilize relaying uplink and/or downlink channels that utilize sidelink channels as part of the uplink and/or downlink channel path (as indicated by the D2D pairing and scheduling). Accordingly, vehicular terminal devices **22008-22010** may execute downlink and uplink communications in **22412** according to the scheduled uplink and downlink channels, where any of vehicular terminal devices **22008-22010** that are involved in D2D pairings may utilize the D2D pairing information to realize the sidelink channels for any relaying uplink and/or downlink channels.

Vehicular terminal devices **22008-22010** and network access node **22001** may then also execute ACK/NACK feedback and retransmission in **22414** until uplink and/or downlink data is successfully received by the intended recipient. In some aspects, this may involve relaying of ACK/NACKs on sidelink channels so that the data on each sidelink channel and across the entire relaying uplink/downlink channel is received successfully. In some aspects, vehicular terminal devices **22008-22010** may apply error detection and/or correction method such as an automatic repeat request protocol, or hybrid automatic repeat request protocol in **22414.**

Network access node **22001** and vehicular terminal devices **22008-22010** may therefore utilize D2D relaying assistance (V2V assistance) in order to realize links in V2I/V2N applications. As network access node **22001** may consider both main uplink/downlink channels and relaying uplink/downlink channels in scheduling in **22408,** network access node **22001** may be able to improve (e.g., maximize) link performance by selecting from a large set of potential uplink and/or downlink channels that also includes relaying uplink and/or downlink channels that use sidelink channels. Furthermore, by maximizing some criteria such as proportionally fair throughput, network access node **22001** can be configured to provide that any scheduled D2D pairings fairly balance throughput across multiple vehicular terminal devices.

In some aspects, vehicular terminal devices **22008-22010** and network access node **22001** may repeat the process of message sequence chart **22400.** This may include updating the neighboring devices with available D2D sidelinks and updating the link quality measurements for sidelink channels and the main uplink and/or downlink channels, which may be dynamically impacted by movement of vehicular terminal devices **22008-22010** in addition to other dynamic factors affecting radio communication environments. Network access node **22001** may therefore update the scheduled uplink/downlink channels and corresponding D2D pairings based on the changing links between vehicular terminal devices **22008-22010.** In some aspects, network access node **22001** and vehicular terminal devices **22008-22010** may repeat the procedure of message sequence chart **22400** with low period, e.g., every frame/subframe or every several frames/subframes. Network access node **22001** and vehicular terminal devices **22008-22010** may therefore frequently adapt the scheduled uplink and downlink channels and corresponding D2D pairings. In some aspects, the vehicular terminal devices involved in the procedure of message sequence chart **22400** may change over time, as vehicular terminal devices move into and out of the concerned area of network access node **22001** and into and out of D2D range of the other vehicular terminal devices.

In some aspects, a central controller may assume some or all of the role of network access node **22001** in the setting of message sequence chart **22400.** For example, in some aspects, a central controller (e.g., a server) located in a core network behind the radio access network may perform D2D discovery period scheduling, provide network assistance information, and/or evaluate uplink/downlink channels and determine scheduling as in **22402** and **22408** of message sequence chart **22400.** In some aspects, the central controller may receive the link quality measurements and transmit the D2D pairing and scheduling via a network access node. Furthermore, in some aspects the central controller may interface with multiple network access nodes and may consequently be configured to arrange D2D pairings for vehicular terminal devices that are connected to different network access nodes, neighboring network access nodes.

In some aspects, the use of D2D relaying assistance for V2I/V2N communications between vehicular terminal devices and network access nodes may improve the link quality of the uplink and/or downlink channels. For example, relaying uplink and/or downlink channels (e.g., uplink and/or downlink channels that include one or more sidelink channel) may have superior quality than the main uplink and/or downlink channels (e.g., the direct channels between network access nodes and vehicular terminal devices). In some aspects, the relaying gains introduced by effective relaying strategies, in particular for decode-and-forward and quantize-map-and-forward, may improve the V2I/V2N links. In some aspects, network access nodes and vehicular terminal devices may employ D2D relaying assistance for V2I/V2N communications opportunistically and/or intermittently, which may depend on the available sidelink channels (including the associated D2D pairing information, including radio access technologies and device relaying capabilities) and the current state of the main uplink and/or downlink channels.

Some aspects may also result in better signal strength or wireless link at the edge of a network and unburdening of a wireless network. Some aspects, may create an assisted infrastructure link, which may be used to bolster an existing infrastructure. In some aspects, where participation in the D2D relaying assistance is optional, there may be incentives for cooperation in D2D relaying assistance. For example, in some aspects, vehicular terminal devices may be granted access to D2D relaying assistance in exchange for cooperating with the D2D relaying assistance, e.g., by being available to provide D2D sidelink channels to other vehicular terminal devices as part of D2D relaying assistance. In some aspects, other incentives such as service benefits, credits, reduction in fees, or other benefits may also be offered.

As detailed above, a network access node, such as network access node **22001,** may determine channels or pairing for V2V cooperation. In some aspects, network access node **22001** can receive from a terminal device, such as any of vehicular terminal devices **22003** and **22008-22010** or terminal device **22002,** a transmission including a determination of link quality between the terminal device and one or more side devices (e.g., terminal devices that are available for communication via a sidelink channel) for opportunistic side-channel transmission, said side devices including any combination of vehicles, drones, or other devices. Having received said link qualities, network access node **22001**may then determine D2D/V2V channels and pairing for cooperation.

In reporting link quality, a vehicular terminal device such as vehicular terminal device **22008** may report a link quality using a variety of protocols, including, and without limitation, LTE-Uu, PC5, dedicated short range communications (DSRC), WLAN, etc.

In some aspects, network access node **22001** can transmit a schedule for D2D cooperation to both the vehicular terminal device and a vehicular terminal device selected for pairing. This transmission can enable synchronization of a transmission schedule between the vehicular terminal device and the vehicular terminal device selected for pairing. This method of evaluating devices for pairing and transmitting communications schedules can also be performed between chains of side devices, such as where a first side device relays to a second side device. The second side device may connect to a base station or may further relay to a third side device. This pattern may be repeated as long as appropriate to achieve the desired connection.

In some aspects, network access node **22001** may schedule D2D cooperation or opportunistic device relaying based on acknowledgement (ACK)/non-acknowledgement (NACK) eavesdropping (ACK/NACK eavesdropping). In this case, network access node **22001** may not receive from a vehicular terminal device a transmission of link quality between the vehicular terminal device and other terminal devices. Rather, as the vehicular terminal device and side devices communicate and determine link quality, they may transmit ACK/NACK receipts, which network access node **22001** can overhear. After overhearing the ACK/NACK exchanges, network access node **22001** can independently assess the link quality between the vehicular terminal device and other side devices and can select a side device for pairing and transmit a transmission schedule accordingly. Network access node **22001** may notify the scheduled D2D pairs via a variety of services or protocols, including, but not limited to, LTE-Uu, WLAN, and DSRC. In some aspects, the communication between terminal devices and the base station or access point may follow V2X standards based on LTE-Direct Extensions (PC5), LTE Uu, DSRC or WLAN, or any air interface protocols. Said standards may be expanded to allow for scheduling of D2D, or to permit a V2X neighbor discovery phase. Where applicable, these standards may rely on ProSe protocols for scheduling of D2D discovery.

In some aspects, the V2V assistance may use a variety of relaying strategies. These may include, without limitation, amplify-and-forward, decode-and-forward, compress-and-forward, or quantize-map-and-forward relaying. In some aspects, the vehicular terminal devices may employ rateless coding technology (e.g., fountain codes, variable proportion of redundancy, etc.) to resend packets upon failure. Accordingly, in some aspects, selected D2D pairs (e.g., pairs of vehicular terminal devices selected for D2D pairing) can use standard protocols such as LTE-Direct extensions, PC5-Interface, or DSRC for D2D communication.

Where a D2D relay is scheduled (e.g., as part of a relaying uplink or downlink channel selected by network access node **22001**), the D2D relay may be configured with a relaying strategy. In some aspects, network access node **22001** may select the relaying strategy for a D2D pairing, such as based on vehicular terminal device capabilities specified by the vehicular terminal devices as uplink control signaling. In some aspects, network access node **22001** may select the relaying strategy as part of D2D pairing selection, and may select D2D pairings based on the relaying strategies supported by the involved vehicular terminal devices. In some aspects, network access node **22001** may first select a D2D pairing and subsequently select a relaying strategy for the D2D pairing. In some aspects, the vehicular terminal devices of a selected D2D pairing may select a relaying strategy to use for the D2D pairing.

In some aspects, vehicles or drones may be used as relays for transmission of wireless communications. This may result in increased link quality, better signal strength or wireless link at the edge of a network, or unburdening of a wireless network. This method of D2D relaying may create an assisted infrastructure link, which may be used to bolster an existing infrastructure.

In some aspects where participation in the D2D relaying assistance is optional, it may be advantageous to create and/or implement incentives for cooperation in D2D relaying. These may include access to D2D relaying for the cooperating device, service benefits, credits, reduction in fees, or other benefits.

In some aspects, the methods of D2D relaying described herein can be performed on an LTE network or a 5G network. It is further contemplated that said methods can be performed on other RATs, including legacy RATs and RATs that are currently unknown, specifically including RATs to be released following the implementation of 5G.

The wireless radio access network, which may include LTE, WLAN, 5G, or any other radio access network, may be capable of using D2D cooperation to improve the quality of the link between a network access node and a vehicular terminal device. This D2D cooperation may be structure to occur opportunistically and intermittently.

In some aspects, network access node **22001** and the vehicular terminal devices may be configured such that the vehicular terminal devices conduct D2D relaying over licensed spectrum. In some aspects, network access node **22001** and the vehicular terminal devices may be configured such that the vehicular terminal devices conduct D2D relaying over unlicensed spectrum. The operation over unlicensed spectrum may occur using air interface technologies such as WLAN, LTE Unlicensed Spectrum (LTE-U), Bluetooth, or another unlicensed spectrum technology.

As indicated above, in some aspects network access node **22001** may schedule a neighbor discovery phase for the vehicular terminal devices to perform D2D discovery. Additionally or alternatively, in some aspects the vehicular terminal devices may initiate the neighbor discovery phase. For example, one or more of the vehicular terminal devices may trigger the neighbor discovery phase due to weakened or unacceptable wireless link or signal strength between the terminal device and the base station.

In some aspects, the vehicular terminal device may discover their D2D neighbors through existing protocols, such as LTE ProSe discovery or Wi-Fi-Direct. Upon discovering D2D neighbors, the vehicular terminal device may identify a quality of the wireless link between the vehicular terminal device and the D2D neighbors, and report the quality of the link to a network access node that is serving the vehicular terminal device. Additionally, in some aspects terminal device may report a quality of the wireless link to a network access node that is D2D neighbor.

In some aspects, in scheduling the D2D assisted communication, network access node **22001** may apply a utility maximization criteria to schedule each terminal device or a D2D/V2V pair, treating the D2D/V2V pair as a generalized MIMO link, with appropriate modification of the MIMO rate estimate. Network access node **22001** may alternatively, or in addition, use a proportional fair metric to schedule users, as well as for D2D pairings. Once a vehicular terminal device and D2D neighbor are paired and scheduled for D2D cooperation, the vehicular terminal devices can exchange their received signal through standard D2D or V2V communications via WLAN or via LTE-Prose.

The neighbor discovery phase may be important in order to identify prospective D2D pairings. In some aspects, vehicular terminal devices discover D2D neighbors based on a variety of factors, including proximity to the terminal device, proximity to the base station, strength of the wireless link with the terminal device, or strength of the wireless link with the base station. In some aspects, vehicular terminal devices may trigger D2D discovery autonomously, such as where the vehicular terminal device initiates D2D discovery without receiving instructions for discovery initiation from the base station.

In some aspects, vehicular terminal devices may perform sidelink channel measurements on discovered D2D neighbors, such as by determining the link quality through a communications exchange with a discovered D2D neighbor. For example, vehicular terminal devices may utilize any known method to measure the link quality between the terminal device and the prospective D2D pairing device, including, but not limited to signal strength, acknowledgment or non-acknowledgment frequency, error rate, or otherwise. Upon determining a link quality between with a discovered D2D neighbor, the vehicular terminal device may transmit the link quality to network access node 22001.

In some aspects, the discovery of D2D neighbors for pairing may be limited to other vehicular terminal devices within a specified or predetermined proximity to a vehicular terminal device. In some aspects, a vehicular terminal device may trigger D2D discovery opportunistically, such as where D2D discovery is performed as needed or as available. In some aspects, a vehicular terminal device may be configured to search for vehicular terminal devices via D2D discovery only when needed, when there are reasonable indicia of usefulness in the near future, or at any time. In some aspects, one or more vehicular terminal devices may trigger D2D discovery intermittently, based on a time to schedule or periodic search, or based on any other desired schedule.

FIG. **225** shows method **22500** performing radio communications at a vehicular terminal device in accordance with some aspects. As shown in FIG. **225,** method **22500** includes discovering one or more vehicular terminal devices that are available for V2V pairings (**22510**), determining one or more V2V link qualities for the one or more vehicular terminal devices and reporting the one or more V2V link qualities to a network access node (**22520**), receiving a scheduling instruction from the base station that specifies a scheduled V2V pairing with a target vehicular terminal device of the one or more vehicular terminal devices (**22530**), and relaying data between the target vehicular terminal device and the network access node according to the scheduled V2V pairing (**22540**).

FIG. **226** shows method **22600** organizing vehicle-to-infrastructure (V2I) or vehicle-to-network (V2N) communications for a network access node in accordance with some aspects. As shown in FIG. **226,** method **22600** includes receiving link quality measurements from a plurality of vehicular terminal devices that characterize V2V links between the plurality of vehicular terminal devices (**22610**), selecting, based on the link quality measurements, a communication channel for a first vehicular terminal device of the plurality of vehicular terminal devices that includes a V2V sidelink channel as part of the communication channel (**22520**), transmitting an instruction scheduling a V2V pairing to the first vehicular terminal device (**22530**), and transmitting or receiving data with the first vehicular terminal device on the communication channel according to the V2V pairing (**22530**).

FIG. **227** shows method **22700** of terminal device management of device-to-device communication in accordance with some aspects. In some aspects, a network access node such as network access node **22001** may execute method **22700.** As shown in FIG. **227**, method **22700** includes determining one or more devices enabled for wireless communication within a proximity of a terminal device (**22710**), determining a link quality for the one or more devices enabled for wireless communication (**22720**), transmitting the determined link quality for the one or more devices enabled for wireless communication (**22730**), receiving a transmission that identifies a selected device of the one or more devices enabled for wireless communication (**22740**), receiving a scheduling protocol for transmission with the selected device (**22750**), and transmitting data to the selected device (**22760**).

FIG. **228** shows method **22800** of network management of device-to-device communication in accordance with some aspects. In some aspects, a network access node such as network access node **22001** may execute method **22800.** As shown in FIG. **228,** method **22800** includes receiving from a terminal device a link quality of one or more devices enabled for wireless transmission (**22810**), selecting, from the one or more devices enabled for wireless transmission, a device for side channel transmission based on the link quality (**22820**), and transmitting to the terminal device and the selected device a schedule for side channel transmission (**22830**).

7.2 Hierarchical Communication #2

In some aspects of this disclosure, a group of airborne vehicles (e.g., drones, balloons, aircraft, satellites, etc.) may form a 'floating cell' that is served by a directional beam provided by a terrestrial network access node, or also relayed by another floating cell. The floating cell may be anchored by an anchor airborne vehicle, which other airborne vehicles in the floating cell may generally remain proximate to. The directional beam provided by the terrestrial network access node may track the floating cell to provide radio access connections to the individual airborne vehicles of the floating cell. The anchor airborne vehicle may handle floating cell positioning and other control functions.

FIG. **229** shows an exemplary network scenario in accordance with some aspects. As shown in FIG. **229,** floating cell **22905** may include a plurality of aerial terminal devices including anchor aerial device **22903** and secondary aerial devices **22904a-22904c.** Network access node **22901** may transmit and receive wireless signals to provide a radio access connection to the aerial terminal devices of floating cell **22905.** In some aspects, anchor aerial device **22903** and secondary aerial devices **22904a-22904c** may be aerial drones, which may be airborne, grounded, or situated upon a surface at an elevation other than ground level. In some aspects, network access node **22901** may be a terrestrial network access node, and may be positioned on the ground, on a tower, or on a building. Alternatively, in some aspects network access node **22901** may be a non-terrestrial network access node, such as positioned in the air (e.g., as another drone or other aerial network access node) or in the water (e.g., surface or underwater vehicles, etc.).

As shown in FIG. **230,** network access node **22901** can include antenna system **23002,** radio module **23004,** and processing module **23006** including beamsteering module **23008** and communication module **23010.** In some aspects, antenna system **23002** and radio module **23004** may be configured in the manner of antenna system **21802** and radio module **21804** as detailed regarding FIG. **218,** and may transmit and receive radio signals under the control of processing module **23006.** Processing module **23006** may therefore control radio communication functionality of network access node **22300.**

In some aspects, processing module **23006** and/or one or more of beamsteering module **23008** or communication module **23008** may be realized as baseband and/or application layer components, and/or may be implemented as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

Beamsteering module **23008** may be configured to perform beamsteering operations, such as by determining the desired steering direction of a directional beam produced by antennas system **23002** and controlling antenna system **23002** (e.g., as a phased antenna array) to steer the directional beam towards a floating cell of aerial terminal devices. Communication module **23010** may be configured to transmit and receive downlink and uplink signals with the aerial terminal devices of the floating cell, which may include control data exchanged with an anchor aerial device of the floating cell. Communication module **23010** may also be configured to perform handshake operations with the anchor aerial device and provide the resulting data to beamsteering module **23008,** which may then determine the steering direction of the directional beam.

Accordingly, in some aspects network access node **22901** can include a transceiver (**23004**) configured to transmit a wireless signal from a network access node for a plurality of drones, said drones including one anchor drone and at least one secondary drone, a communication module (**23010**) configured to establish a wireless link with the anchor drone, and a beamsteering module (**23008**) configured to calculate a beamforming setting, wherein the transceiver is configured to transmit to the anchor drone control information for the at least one secondary drone, and to receive a location information from the anchor drone, and beamsteering module further configured to determine a beamforming setting to steer a directional antenna beam towards the floating cell based on the location information.

FIG. **231** shows an exemplary internal configuration of anchor aerial device **22903** in accordance with some aspects. As shown in FIG. **231,** anchor aerial device **22903** may include antenna system **23102,** RF transceiver **23104,** communication module **23106,** steering and movement system **23108,** and sensor **23110.** In some aspects, antenna system **23102** and RF transceiver **23104** may be configured in the manner of antenna system **21702** and RF transceiver **21704** of terminal device **21602** as detailed regarding FIG. **217.** In some aspects, communication module **23106** may be realized as baseband and/or application layer components, and/or may be implemented as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. Steering and movement system **23108** may be implemented as a set of rotors and/or aerial propulsion engines and associated electronics control circuitry.

Communication module **23106** may be configured to transmit and receive signals in accordance with the operations detailed herein anchor aerial devices, including maintaining a control signaling connection with one or more secondary aerial devices of a floating cell (such as secondary aerial devices **22904a-22904c**) and exchanging control data with the secondary aerial devices. Communication module **23106** may further be configured to transmit and receive uplink and downlink signals with a network access node (such as network access node **22901**) in the manner detailed above regarding anchor aerial devices. Communication module **23106** may coordinate with the network access node to steer the directional beam provided by the network access node to cover the area occupied by the floating cell.

Sensor **23110** may be an image sensor, a distance sensor, a radar sensor, or a sonar sensor. Sensor **23110** may provide sensor data to communication module **23106** that indicates the positions of secondary aerial devices relative to anchor aerial device **22903.** In some aspects, communication module **23106** may monitor the relative positions of the secondary aerial devices via the sensor data provided by sensor **23110** and, if communication module **23106** determines that a secondary aerial device is outside of the confined floating cell area (e.g., further away from anchor aerial device **22903** than a certain distance), communication module **23106** may generate and transmit an instruction to the secondary aerial device that instructs the secondary aerial device to move back towards anchor aerial device **22903.**

In some aspects, communication module **23106** may additionally or alternatively evaluate radio measurements provided by secondary aerial devices to monitor the positions of the secondary aerial devices, such as by comparing a signal strength, signal quality, or latency measurement to a threshold to determine whether any of the secondary aerial devices are outside of the confined floating cell area. Communication module **23106** may generate and transmit an instruction to a secondary aerial device that is outside of the confined floating cell area that instructs the secondary aerial device to move back towards anchor aerial device **22903.**

In some aspects, anchor aerial device **22903** may utilize sensor **23110** and/or radio measurements to monitor the positions of multiple secondary aerial devices of the floating cell to determine a floating cell radius, which communication module **23106** may provide to the network access node to enable the network access node to adjust a beamwidth of the directional antenna beam based on the floating cell radius.

Accordingly, in some aspects anchor aerial drone **23100** can include a communication module (**23106**) configured to establish a wireless link with a secondary drone and a network access node, transceiver (**23104**) configured to transmit to the secondary drone a cell identification for use by the anchor drone and the secondary drone, and a maximum distance between the anchor drone and the secondary drone, the communication module further configured to determine a location information of the anchor drone, and the transceiver further configured to transmit the location information to the network access node for beamforming, receive a control information from the network access node, and transmit the control information to the secondary drone.

FIG. **232** shows an exemplary internal configuration of secondary aerial device **22904a** in accordance with some aspects. In some aspects, secondary aerial devices **22904b** and **22904c** may be configured in the manner of secondary aerial device **22904a.** As shown in FIG. **232,** secondary aerial device **22904a** may include antenna system **23202,** RF transceiver **23204,** communication module **23206,** positioning module **23208,** steering and movement system **23210,** and a sensor system **23212.** In some aspects, antenna system **23202** and RF transceiver **23204** may be configured in the manner of antenna system **21702** and RF transceiver **21704** of terminal device **21602** as detailed regarding FIG. **217.**

In some aspects, communication module **23206** and/or positioning module **23208** may be realized as baseband and/or application layer components, and/or may be implemented as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module. Steering and movement system **23210** may be implemented as a set of rotors and/or aerial propulsion engines and associated electronics control module.

Communication module **23206** may be configured to transmit and receive signals in accordance with the operations introduced above for secondary aerial devices, including maintaining a control signaling connection with an anchor aerial device, exchanging control information with the anchor device, and transmitting and receiving communications with a network access node. As previously detailed regarding secondary aerial devices **22904a-22904c,** communication module **23206** may maintain the control signaling connection with the anchor aerial device either directly or via a multi-hop or mesh network scheme. Communication module **23206** may transmit and receive uplink and downlink signals with the network access node either directly or via a relaying link with the anchor aerial device.

Positioning module **23208** may be configured to enforce a confined floating cell area of the floating cell by attempting to keep secondary aerial device **22904a** within a certain distance of the anchor aerial device. Sensor **23212** may be an image sensor, a distance sensor, a radar sensor, or a sonar sensor. Positioning module **23208** may monitor the distance between secondary aerial device **22904a** and the anchor aerial device based on sensor data provided by sensor **23212** to determine whether secondary aerial device **22904a** is outside of the confined floating cell area that is defined by the position of an anchor aerial device of the floating cell. In some aspects, positioning module **23208** may also interface with communication module **23206** to evaluate radio measurements on signals received from the anchor aerial device to determine whether the radio measurements indicate that secondary aerial device **22904a** is outside of the confined floating cell area. Positioning module **23208** may interface with steering and movement module **23210** to trigger movement of secondary aerial device **22904a** towards the anchor aerial device when secondary aerial device **22904a** moves outside of the confined floating cell area.

In some aspects, communication module **23206** may receive an instruction from the anchor terminal device that instructs secondary aerial device **22904a** to move closer to the anchor aerial device, such as in response to secondary aerial device **22904a** moving outside of the confined floating cell area. Communication module **23206** may provide the instruction to positioning module **23208,** which may control steering and movement system **23210** to move secondary aerial device **22904a** towards the anchor aerial device.

Accordingly, in some aspects secondary aerial device **22904a** can include a transceiver **23204,** configured to receive from an anchor drone a maximum allowable distance from the anchor drone, a cell identification, and a control information, a positioning module **23208,** configured to determine a location of the anchor drone and determine travel to remaining within the maximum allowable distance from the anchor drone, and a communication module **23206,** configured to operate on the cell identification received from the anchor drone.

As shown in FIG. **229,** network access node **22901** may transmit directional beam **22906** to serve floating cell **22905,** such as utilizing a beamsteering antenna array. The aerial terminal devices of floating cell **22905** may be distributed across a three-dimensional space. Accordingly, network access node **22901** may direct directional beam **22906** in the direction of floating cell **22905.**

As the aerial terminal devices of floating cell **22905** may be mobile (e.g., may move aerially in a three-dimensional space), network access node **22901** may 'track' the position of floating cell **22901** and steer directional beam **22906** in accordance with the moving position of floating cell **22905.** In some aspects, network access node **22901** may utilize the directional beam **22906** in the downlink and uplink directions (e.g., with a phased antenna array or other beamsteering technique) and may consequently transmit and receive radio signals with floating cell **22905** via directional beam **22906.**

In some aspects, anchor aerial device **22903** may coordinate with network access node **22901** to maintain accurate beamtracking for directional beam **22906.** For example, anchor aerial device **22903** and network access node **22901** may perform handshake procedures to exchange information about the height and direction of floating cell **22905** (e.g., positioning information of floating cell **22905**), the radius of floating cell **22905,** the movement speed of floating cell **22905,** etc. In some aspects, anchor aerial device **22903** may perform radio measurements (e.g., signal strength and/or signal quality) on directional beam **22906** and provide feedback to network access node **22901,** which network access node **22901** may utilize to adjust the steering direction and/or beamwidth (e.g., via directional steering and/or beam broadening/narrowing of a phased array antenna for antenna system **22902**) of directional beam **22906.** In some aspects, secondary aerial devices **22904a-22904c** may perform radio measurements on directional beam **22906** and provide feedback to network access node **22901** (e.g., directly or via anchor aerial device **22903**), which network access node **22901** may then utilize to adjust the steering direction and/or beamwidth of directional beam **22906.** In some aspects, this may be part of a sector sweep procedure in which network access node **22901** may sweep through different steering directions for directional beam **22906,** receive feedback (e.g., a signal strength measurement) for each steering direction from anchor aerial device **22903,** and determine which steering direction is appropriate based on the feedback.

In some aspects, anchor aerial device **22903** may act as a relay to relay uplink and/or downlink data between network access node **22901** and secondary aerial devices **22904a-22904c.** For example, network access node **22901** may steer directional beam **22906** towards anchor device **22903** and transmit downlink data to anchor device **22903** via directional beam **22906,** where the downlink data may be intended for one of secondary aerial devices **22904a-22904c,** e.g., secondary aerial device **22904a.** Anchor device **22903** may then receive the downlink data and relay the downlink data to secondary aerial device **22904a,** e.g., over a D2D connection between anchor device **22903** and secondary aerial device **22904a.** Additionally or alternatively, in some aspects, anchor aerial device **22903** may relay uplink data from one or more of secondary aerial devices **22904a-22904c** to network access node **22901** (which may receive the uplink data via directional beam **22906** using receive-direction beamsteering).

In some aspects, secondary aerial devices **22904a-22904c** may receive downlink data directly from network access node **22901** (e.g., not via a relay from anchor aerial device **22903**). Accordingly, in some aspects, network access node **22901** may steer directional beam **22906** towards the entirety of floating cell **22905.** For example, network access node **22901** may adjust the beamwidth of directional beam **22906** based on the floating cell radius of floating cell **22905,** which may increase link performance. In some aspects, network access node **22901** may direct directional beam **22906** substantially in the direction of anchor aerial device **22903.** In some aspects, network access node **22901** may direct directional beam **22906** towards a central point of floating cell **22905.**

In some aspects, floating cell **22905** may maintain a confined floating cell area, which may assist network access node **22901** to steer directional beam **22906** beam to cover the individual positions of the various aerial terminal devices of floating cell **22905.** In some aspects, secondary aerial devices **22904a-22904c** may maintain a confined floating cell area by staying within a certain distance from anchor device **22903.** In some aspects, secondary aerial devices **22904a-22904c** may attempt to stay within the certain distance from anchor aerial device **22903** by measuring a physical distance to anchor aerial device **22903,** such as with positional and/or geolocational sensors (e.g., GPS, proximity sensor data, sonar sensor data, camera data, etc.). If the measured physical distance is greater than the certain distance for a given secondary aerial device, the secondary aerial device may move back towards anchor aerial device **22903** to meet the distance criteria of floating cell **22905.**

In some aspects, secondary aerial devices **22904a-22904c** may attempt to stay within the certain distance from anchor aerial device **22903** by measuring radio signals and evaluating the signal strength. If the signal strength is less than a predefined signal strength threshold for a given secondary aerial device, the secondary aerial device may move back towards anchor aerial device **22903** to meet the distance criteria of floating cell **22905.** In some aspects, secondary aerial devices **22904a-22904c** may maintain the certain distance based on other radio measurements, such as staying within a distance of floating cell **22905** for which a link quality stays above a predefined threshold, for which latency stays below a predefined threshold, etc. In some aspects, secondary aerial devices **22904a-22904c** may consider multiple of such criteria, for example, multiple distance parameters (e.g., physical distance or signal strength distance), in maintaining the confined floating cell area. In some aspects, the aerial terminal devices of floating cell **22905** may additionally monitor the relative distances between one another and/or with anchor aerial device **22903** as part of beamforming and/or security checks (e.g., by GPS, proximity sensor data, sonar sensor data, camera data, etc.).

In some aspects, anchor aerial device **22903** may serve as a hub for secondary aerial devices **22904a-22904c.** For example, as secondary aerial devices **22904a-22904c** may remain within a certain distance of anchor aerial device **22903** to maintain the confined floating cell area, anchor aerial device **22903** may serve as a movement hub for secondary aerial devices **22904a-22904c.** Accordingly, secondary aerial devices **22904a-22904c** may follow, or 'shadow', the movement of anchor aerial device **22903** as anchor aerial device **22903** moves in order to maintain the confined floating cell area.

In some aspects, anchor aerial device **22903** may also enforce the confined floating cell area by monitoring the positions of secondary aerial devices **22904a-22904c.** If anchor aerial device **22903** determines that any of secondary aerial devices **22904a-22904c** have moved further than the certain distance from anchor aerial device **22903,** anchor aerial device **22903** may transmit an instruction to the secondary aerial device that is outside of the confined floating cell area to instruct that secondary aerial device to move back within the confined floating cell area. In some aspects, anchor aerial device **22903** may monitor the positions of secondary aerial devices **22904a-22904c** by with an imaging sensor, a radar sensor, a sonar sensor, and/or by radio measurements.

In some aspects, anchor aerial device **22903** may serve as a control hub for secondary aerial devices **22904a-22904c.** For example, anchor aerial device 22903 may provide control information to secondary aerial devices **22904a-22904c,** which may be local control information generated by anchor aerial device **22903** or control information provided by network access node **22901.** Secondary aerial devices **22904a-22904c** may maintain a control signaling connection with anchor aerial device **22903** in order to receive such control information from anchor aerial device **22903.**

The aerial terminal devices of floating cell **22905** may locally communicate with one another according to a D2D communication scheme, such as, without limitation, LTE Direct, LTE ProSe, DSRC, WLAN/Wi-Fi, Bluetooth, and/or mmWave. FIG. **229** shows an exemplary D2D link **22907** between secondary aerial device **22904c** and secondary aerial device **22904a.** In some aspects, secondary aerial devices **22904a-22904c** may maintain direct connections with anchor aerial device **22903.** Alternatively, in some aspects, secondary aerial devices **22904a-22904c** may utilize relaying connections to communicate with anchor aerial device **22903.** For example, in some aspects, the aerial terminal devices of floating cell **22905** may utilize a multi-hop communication scheme to communicate with each other, and may in some aspects be arranged as a mesh network.

In some aspects, network access node **22901** may utilize mmWave to communicate with floating cell **22905** (e.g., for directional beam **22906**). In some aspects, network access node **22901** may utilize another radio access technology, such as, without limitation, LTE, UMTS, GMTS, WLAN/Wi-Fi, Bluetooth, or 5G.

In some aspects, floating cell **22905** may handover to another network access node. For example, as shown in FIG. **229,** network access node **22908** may also be configured to serve floating cells such as floating cell **22905.** Accordingly, in an exemplary scenario where floating cell **22905** moves from the coverage area of network access node **22901** to the coverage area of network access node **22908,** floating cell **22905** may handover from network access node **22901** to network access node **22908.** Accordingly, network access node **22908** may generate a directional beam steered in the direction of floating cell **22905** and begin transmitting and receiving data with floating cell **22905** (e.g., in the manner detailed above regarding network access node **22901**), while network access node **22901** may discontinue directional beam **22906.**

In some aspects, anchor device **22903** may be configured to manage handovers for floating cell **22905,** and may accordingly make decisions (e.g., based on radio measurements by anchor aerial device **22903** and/or secondary aerial devices **22904a-22904c**) regarding when to handover and which network access nodes to handover to. In some aspects, the initial network access node (e.g., network access node **22901**) and/or the target network access node (e.g., network access node **22908**) may also contribute partially or completely to handover decisions for floating cell **22905.**

In some aspects, the same cell ID may be used for floating cell **22905** even when floating cell **22905** transitions between network access nodes. In some aspects, individual secondary aerial devices may also engage in mobility operations, such as by transferring to another floating cell. For example, a secondary aerial device such as secondary aerial device **22904a** may transfer from floating cell **22905** to another floating cell. For instance, as the secondary aerial devices may be constrained to remain within a certain distance of anchor aerial device **22903**, in an exemplary scenario secondary aerial device **22904a** may desire to move to a location outside of the constrained limits of floating cell **22905.** Accordingly, if there is another proximate floating cell that is closer to the desired location of secondary aerial device **22904a,** secondary aerial device **22904a** may transfer to the other floating cell. In some aspects, secondary aerial device transfers may include a specific procedure between the transferring secondary aerial device, the anchor aerial device of the initial floating cell, and/or the anchor aerial device of the new floating cell. Secondary aerial devices may also transfer for reasons other than movement, such as to transfer to a floating cell that offers better radio conditions. In another aspect, floating cells may join up (e.g., dock to one another, or keep in close proximity to each other, etc.) to increase transmit or receive cell power or cell coverage or number of aerial devices able to connect to. In other aspects, aerial devices may be handed over to another floating cell or floating relay or terrestrial cell.

FIG. **233** shows frequency diagram **23300** that illustrates an exemplary spectrum allocation in accordance with some aspects. As shown in FIG. **233,** operating bandwidth **23310** may be the total spectrum allocated to the floating cell and network access node communications. In some aspects, operating bandwidth **23310** may be divided into bandwidth **23320** and bandwidth **23330,** where bandwidth **23320** may be allocated for transmissions between network access nodes, e.g., network access node **22901,** and floating cells, e.g., floating cell **22905,** and bandwidth **23330** may be allocated for local transmissions between aerial terminal devices of a floating cell, e.g., floating cell **22905.** Accordingly, in some aspects, the aerial terminal devices of floating cell **22905** may execute local D2D communications on bandwidth **23320.**

In some aspects, the aerial terminal devices of floating cell **22905** may share bandwidth **23320** according to a shared channel access scheme. For example, aerial terminal devices of floating cell **22905** may access bandwidth **23320** according to a contention-based channel access scheme such as carrier sense multiple access (CSMA). Alternatively, in some aspects, anchor aerial device **22903** may operate in a coordinator role in order to schedule and grant access to bandwidth **23320** amongst secondary aerial devices **22904a-22904c,** such as for time and/or frequency resource allocations of bandwidth **23320.** As previously indicated, floating cell **22905** may utilize any radio access technology for local communication, such as LTE Direct, LTE ProSe, DSRC, WLAN/Wi-Fi, Bluetooth, or mmWave. Although FIG. **233** depicts the inter-floating cell transmissions of bandwidth **23320** as having variable lengths, in some aspects, the inter-floating cell transmissions of bandwidth **23320** may be confined to a fixed length.

Network access node **22901** may transmit downlink signals to floating cell **22905** and receive downlink signals from floating cell **22905** on bandwidth **23330**. As previously indicated, in some aspects, network access node **22901** may communicate directly with anchor aerial device **22903** (which may then relay signals to and from secondary aerial devices **22904a-22904c**), while in other aspects network access node **22901** may communicate directly with anchor aerial device **22903** and secondary aerial devices **22904a-22904c.** In some aspects, network access node **22901** and floating cell **22905** may utilize bandwidth **23330** according to a time division duplexing (TDD) scheme (such as shown in the exemplary setting of FIG. **233**)**.** Alternatively, in some aspects network access node **22901** and floating cell **22905** may utilize bandwidth **23330** in a frequency division duplexing scheme, where bandwidth **23330** may be divided into a downlink subband (for transmissions from network access node **22901** to floating cell **22905**) and an uplink subband (for transmissions from floating cell **22905** to network access node **22901**)**.**

Although depicted as being equally allocated in frequency in FIG. **233**, this depiction is exemplary. Accordingly, in some aspects operating bandwidth **23310** may be allocated such that bandwidth **23320** occupies a different band size (e.g., more or less frequency) than bandwidth **23330.** In some aspects, network access node **22901** and floating cell **22905** (e.g., anchor aerial device **22901**) may determine the allocation of operating bandwidth **23310** into bandwidth **23320** and **23330** as part of a bandwidth negotiation procedure, which may be triggered during initial attach of floating cell **22905** to network access node **22901** and/or repeatedly during the duration of the connection of floating cell **22905** to network access node **22901.** In some aspects, network access node **22901** and floating cell **22905** may determine the allocation of operating bandwidth **23310** based on the number of aerial terminal devices in floating cell **22905** and/or the bandwidth requirements of the aerial terminal devices in floating cell **22905.**

Accordingly, some aspects may provide a method of managing a floating cell of drones, e.g., floating cell **22905,** using one or more anchor drones, e.g., anchor aerial device **22903.** Where multiple drones are clustered within a floating cell, it may be possible or beneficial to communicate with or control the drones by limiting the ground-to-drone-communication to communication between a network access node and a single anchor drone within the drone cluster. Further drone-to-drone-communication can be achieved between the anchor drone and the remaining secondary drones, for example, one or more of secondary aerial devices **22904a-22904c,** using millimeter wave beamforming as communication channels, with limited transmission power to prevent interference with ground cell signals.

In some aspects, a ground-based network access node, e.g., network access node **22901,** can transmit to the floating cell, e.g., floating cell **22905.** Network access node **22901** may form a beam over the sky, e.g., directional beam **22906,** to serve the floating cell in the uplink and downlink. Drones located within floating cell **22905** may become members of floating cell **22905.** These drones, such as secondary aerial devices **22904a-22904c** may be configured to remain a specified distance from an anchor drone, e.g., anchor aerial device **22903.**

In some aspects, anchor aerial device **22903** and secondary aerial devices **22904a-22904c** can share a single cell ID. This cell ID can remain constant, even as the aerial terminal devices transfer from one ground-based network access node to another, e.g., from network access node **22901** to network access node **22908.** In some aspects, anchor aerial device **22903** can provide the cell ID to secondary aerial devices **22904a-22904c.**

In some aspects, anchor aerial device **22903** can serve as a hub for other members of floating cell **22905,** e.g., secondary aerial devices **22904a-22904c.** Anchor aerial device **22903** may provide secondary aerial devices **22904a-22904c** with control information. Anchor aerial device **22903** can receive this control information from network access node **22901** and/or generate the control information locally. Anchor aerial device **22903** may then provide the control information to secondary aerial devices **22904a-22904c.**

In some aspects, transmission between anchor aerial device **22903** and secondary aerial devices **22904a-22904c** may happen directly or indirectly. For example, anchor aerial device **22903** and one or more of secondary aerial devices **22904a-22904c** may be in direct communication with one another, anchor aerial device **22903** and the one or more of secondary aerial devices **22904a-22904c** transmit and receive data over a direct channel. Alternatively, in some aspects, anchor aerial device **22903** and one or more of secondary aerial devices **22904a-22904c** transmit and receive data indirectly, such as where information is relayed between anchor aerial device **22903** and one or more of secondary aerial devices **22904a-22904c,** for example, over a multi-hop or mesh network such as an IEEE 802.11s Extended Service Set (ESS) Mesh Networking enhancement of IEEE 802.11, IEEE 802.15.5 wireless personal area network (WPAN) Mesh Networking, or another multi-hop or mesh networking framework.

In some aspects, anchor aerial device **22903** may be in communication with network access node **22901** to coordinate in beamsteering for directional antenna beam **22906.** For example, anchor aerial device **22903** and network access node **22901** may perform a handshake in which anchor aerial device **22903** can provide information about the altitude and direction of floating cell **22905** to network access node **22901.** Anchor aerial device **22903** can also provide a floating cell radius or any other physical, geographical, or structural information that can be used by network access node **22901** to calculate beamsteering settings for directional antenna beam **22906.** With this information, network access node **22901** can determine beamsteering settings to appropriately steer directional antenna beam **22906** to cover an area occupied by floating cell **23004.**

In some aspects, the bandwidth used for communication between anchor aerial device **22903,** secondary aerial devices **22904a-22904c,** and network access node **22901** can be divided into two subbands, which may assist in reducing interference and enable higher communication efficiency.

In some aspects, an operating bandwidth may be divided into one or more sections, such as section W1 and section W2, wherein W1 is used for communication between network access node **22901** and anchor aerial device **22903,** and wherein W2 is used for inter-drone communication such as communication between anchor aerial device **22903** and secondary aerial devices **22904a-22904c.** In some aspects, the allocation of the operating band into W1 and W2 can be determined by negotiation between network access node **22901** and anchor aerial device **22903.** Network access node **22901** and terminal anchor aerial device **22903** may perform these negotiations based on requirements or demand such as number of users, throughput, applications, services, cost, level of interference, etc.

In some aspects, a confined floating cell area may be maintained for floating cell 22905. This may be useful in determining appropriate beamforming settings (with manageable beamwidth for directional antenna beam **22906**) or performing security checks. In some aspects, secondary aerial devices **22904a-22904c** may be responsible for maintaining the confined floating cell area by remaining within a certain distance of anchor aerial device **22903.** Secondary aerial devices **22904a-22904c** can monitor the distance based on a physical distance (e.g., based on image/video data or a distance sensor) or by radio measurements. In some aspects, anchor aerial device **22903** can utilize a combination of geolocation and intelligent 3D network quality measurements to cause the area of floating cell **22905** to be covered by directional antenna beam **22906** with guaranteed minimal data path bandwidth.

In some aspects, floating cell **22905** may not have an anchor aerial device, such as where anchor aerial device **22903** leaves floating cell **22905** or is deactivated. Secondary aerial devices **22904a-22904c** can then select amongst themselves an anchor aerial device. Criteria for anchor aerial device selection can be chosen from a broad array of options and may include one or more of: signal strength, wireless link quality, position, flight or movement capabilities, power availability, battery charge, battery life, and/or any other relevant factors.

In some aspects, the ability to control a floating cell such as floating cell **22905** through communication between network access node **22901** and anchor aerial device **22903** can simplify the management of a drone swarm. In light of the confined floating cell area that secondary aerial devices **22904a-22904c** are expected to maintain, movement by anchor aerial device **22903** can result in secondary aerial devices **22904a-22904c** following the movement anchor aerial device **22903.** This can result in a drone swarm. Some aspects can simplify the management of a drone swarm by restricting network access node communications to a single anchor drone, rather than a plurality of drones. In an exemplary scenario, the drone swarm may be a dynamic drone swarm, which can be directed to a location to complete a function. Moreover, the dynamic drone swarm may be increased or decreased in size or drone members on a planned or ad hoc basis to complete tasks as necessary.

Some of the current aspects can be applied to motor vehicles. For example, a network access node may be in communication with an anchor vehicle (analogous to anchor aerial device **22903**), wherein the anchor vehicle responsible for coordinating with one or more secondary vehicles (analogous to secondary aerial devices **22904a-22904c**). The secondary vehicles can follow the movements of the anchor vehicle in the manner that secondary aerial devices **22904a-22904c** follow the movements of anchor aerial device **22903** as detailed above. This can allow for manipulation or control over multiple vehicles while only exhibiting actual control over a single vehicle, which may greatly simplify the process of remotely managing a fleet or platoon of vehicles.

Some of the current aspects can be applied to mobile robots, wherein a network access node is in communication with an anchor robot (analogous to anchor aerial device **22903**), and further communication is established between the anchor robot and one or more secondary robots (analogous to secondary aerial devices **22904a-22904c**). Wherein the secondary robots are configured to remain within a specified distance of the anchor robot, control by the network access node of the anchor robot may effectively control a group or platoon of mobile robots.

Some of the current aspects can be applied to a plurality of drones that are utilized for delivery. For example, delivery of shipments or packages via a single drone may be undesirable or impossible, and such delivery may more desirably be achieved with a plurality of drones. Some aspects may provide a mechanism to control of a plurality of drones for the delivery of packages or shipment. Where a plurality of drones is used for delivery, the weight of a shipment may be spread across the carrying capabilities of a plurality of drones, such that the plurality can effectively deliver the package where delivery would be undesirable or impossible with a single drone.

In some aspects, a cluster of nodes (e.g., swarm of drones, mixed group of aircraft and drones, etc.) may be selected based on the specified drone application. Examples of specified drone applications include delivery drones, organized for the delivery of a shipment or package, or drones for dynamic network function, wherein drones gather within a radius of a locality for creation or bolstering of a network.

In some aspects, a floating cell such as floating cell **22905** can utilize a communication protocol to enable communications between anchor aerial device **22903** and secondary aerial devices **22904a-22904c.** The communication protocol can include both a broadcast or multicast mechanism that permits anchor aerial device **22903** to send data and control messages to secondary aerial devices **22904a-22904c,** as well as a unicast mechanism to enable anchor aerial device **22903** to send unicast data to one or more secondary aerial devices **22904a-22904c** individually.

In some aspects, anchor aerial device **22903** can have the authority to associate or disassociate secondary aerial devices as members of floating cell **23004.** Anchor aerial device **22903** may receive or issue requests from prospective secondary aerial devices for admission to floating cell **22905,** which anchor aerial device **22903** may approve or deny.

In some aspects, anchor aerial device **22903** may communicate with network access node **22901** to decide whether to accept or deny the requests. Anchor aerial device **22903** may request or receive from network access node **22901** information related to the requesting drone for determination of a course of action with respect to the request. In responding to a request, anchor aerial device **22903** may take into consideration any data that is relevant to the request, including, but not limited to quality of the wireless link and location of the prospective secondary aerial device.

In certain exemplary scenarios, anchor aerial device **22903** may identify or otherwise come into contact with the one or more additional floating cells. In this event, anchor aerial device **22903** may instruct the one or more additional floating cells to establish a wireless connection with anchor aerial device **22903.** Anchor aerial device **22903** may receive or issue requests to join floating cell **22905**. Anchor aerial device **22903** may grant such requests. Upon issue of permission, the one or more additional floating cells may join the original floating cell.

In some aspects, anchor aerial device **22903** may monitor the positions of secondary aerial devices **22904a-22904c** in order to enforce the confined floating cell area. When a secondary aerial device communicates to anchor aerial device **22903** a position of the secondary aerial device, that position may be in absolute location or distance from anchor aerial device **22903.** When anchor aerial device **22903** communicates to network access node **22901** a position of anchor aerial device **22903** or floating cell **22905,** the position may be in absolute location, or may be a distance from network access node **22901,** or otherwise.

When a secondary aerial device communicates its position to anchor aerial device **22903,** the secondary aerial device may first obtain a position of anchor aerial device **22903.** The secondary aerial device can calculate this position using data obtained from photos, videos, or radar. The secondary aerial device may obtain the position by requesting set location from anchor aerial device **22903.** Anchor aerial device **22903** may then respond with a transmission of its location.

In some aspects, floating cell **22905** may improve the radio links, such as the wireless link within LTE or 5G, by providing opportunistic D2D assistance in accordance with some aspects. In some aspects, the techniques detailed regarding any of FIGs. **229-233** may be applied to types of vehicles other than aerial terminal devices, such as terrestrial or aquatic vehicles. Accordingly, network access node **22901** may steer an antenna beam towards a cell of these vehicles using any of the techniques described above. An anchor device of the devices may manage the positioning of the cell and/or forward information between the devices. The devices may then maintain a radius of the cell by during movement by maintaining within a certain distance of the anchor device.

FIG. **234** shows method **23400** for controlling a floating cell at an anchor aerial device of the floating cell in accordance with some aspects. As shown in FIG. **234**, method **23400** includes maintaining a signaling connection with one or more secondary aerial devices of the floating cell during collective movement of the floating cell (**23410**), and coordinating with the network access node to steer a directional antenna beam provided by the network access node to cover an area occupied by the floating cell (**23420**).

FIG. **235** shows method **23500** of operating a secondary aerial device in a floating cell including a plurality of aerial terminal devices in accordance with some aspects. As shown in FIG. **235,** method **23500** includes maintaining a signaling connection with an anchor aerial device of the floating cell and transmitting and receiving data with a network access node (**23510**), and controlling a position of the secondary aerial device to maintain less than a predefined distance between the secondary aerial device and the anchor aerial device according to one or more distance parameters (**23520**).

FIG. **236** shows method **23600** of operating a network access node in accordance with some aspects. As shown in FIG. **236,** method **23600** includes transmitting and receiving data with a floating cell including an anchor aerial device and one or more secondary aerial devices that follow the movement of the anchor aerial device (**23610**), and coordinating with the anchor aerial device to steer a directional antenna beam to cover an area occupied by the floating cell (**23620**).

FIG. **237** shows method **23700** for network management of a floating cell in accordance with some aspects. As shown in FIG. **237,** method **23700** includes transmitting a wireless signal from a network access node for a plurality of drones (**23710**), said drones including one anchor drone and at least one secondary drone, establishing a wireless link with the anchor drone (**23720),** transmitting to the anchor drone control information for the at least one secondary drone (**23730**), receiving a location information from the anchor drone (**23740**), and determining a beamforming setting to steer a directional antenna beam towards the floating cell based on the location information (**23750**).

FIG. **238** shows method **23800** of anchor drone operation within a floating cell in accordance with some aspects. As shown in FIG. **238,** method **23800** includes establishing a wireless link with a secondary drone and a network access node (**23810**), transmitting to the secondary drone a cell identification for use by the anchor drone and the secondary drone (**23820**), transmitting to the secondary drone a maximum distance between the anchor drone and the secondary drone (**23830**), transmitting location information to the network access node for beamforming (**23840**), receiving control information from the network access node (**23850**), and transmitting the control information to the secondary drone (**23860**).

FIG. **239** shows method **23900** of operating a secondary drone within a floating cell in accordance with some aspects. As shown in FIG. **239**, method **23900** includes establishing a wireless link with an anchor drone (**23910**), receiving from the anchor drone a maximum allowable distance from the anchor drone (**23920**), determining a location of the anchor drone (**23930**), determining travel to remaining within the maximum allowable distance from the anchor drone (**23940**), receiving a cell identification from the anchor drone (**23950**), operating on the cell identification received from the anchor drone (**23960**), and receiving control information from the anchor drone (**23970**).

7.3 Hierarchical Communication #3

In some aspects of this disclosure, a vehicular terminal device may be enabled as a mobile infrastructure node to provide network connectivity to other proximate terminal devices. As vehicular terminal devices may have many features that are absent from other types of terminal devices, such as a greater power supply, higher transmit power, larger processing capacity, more/larger antennas, and greater mobility, vehicular terminal devices acting as mobile infrastructure nodes may provide a gateway to an underlying radio communication network to proximate terminal devices that would otherwise not have network connectivity (e.g., due to nearby infrastructure failure, network overload or maintenance, insufficient transmit power, etc.).

FIG. **240** shows an exemplary scenario in which vehicular terminal device **24002** is deployed as mobile infrastructure node **24002** in accordance with some aspects. As shown in FIG. **240**, mobile infrastructure node **24002** may act as a gateway for various other proximate terminal devices **24018**, **24020**, **24022**, and **24024**, which may be any type of terminal device (including other vehicular terminal devices). Accordingly, mobile infrastructure node **24002** may act as an interface between terminal devices **24018-24024** and radio access infrastructure **24016** (which may be a base station, an access point, or another type of network access node that has a backhaul connection to a core or internet network) to provide network connectivity to terminal devices **24018-24024**.

As shown in FIG. **240**, mobile infrastructure node **24002** can include processing module **24004**, memory **24006**, camera **24008**, backhaul antenna system **24010**, fronthaul antenna system **24012**, and power supply **24014**. Although shown as being external to the frame of mobile infrastructure node **24002** in the exemplary setting of FIG. **240**, one or more of camera **24008**, backhaul antenna system **24010**, and fronthaul antenna system **24012** may be integrated within mobile infrastructure node **24002** and may in some aspects be protected from external damage by the external frame/chassis of mobile infrastructure node **24002**.

Processing module **24004** may be a processor or controller that executes software-defined program code which controls the operations of mobile infrastructure node **24002** related to radio communications. In some aspects, processing module **24004** may also include hardware-defined components such as hardware accelerators and/or other dedicated integrated circuitry configured to perform specific processing tasks.

In some aspects, processing module **24004** may also include radio circuitry configured to perform transmission and reception functions for radio communication operations, such as preparing radio signals for transmission and processing received radio signals. Control, decision, and communication functionality for mobile infrastructure node **24002** can therefore be implemented via operation of software-defined components and/or hardware-defined components of processing module **24004**.

Processing module **24004** may transmit and receive radio signals via backhaul antenna system **24010**, which may include one or more antennas. In some aspects, backhaul antenna system **24010** may be deployed as roof-mounted antennas or another type of large-antenna architecture, which may enable mobile infrastructure node **24002** to have high performance radio transmission and reception.

In some aspects, backhaul antenna system **24010** may be deployed as a steerable antenna array (e.g., a phased array antenna) that can enable mobile infrastructure node **24002** to steer one or more beams towards an intended target, such as towards radio access infrastructure **24016**. In some aspects, mobile infrastructure node **24002** may utilize backhaul antenna system **24010** to transmit and receive signals with radio access infrastructure **24016**, and accordingly may utilize backhaul antenna system **24010** as a backhaul connection to a communication network.

Processing module **24004** may utilize backhaul antenna system **24010** in accordance with any radio access technology, such as, without limitation, LTE, UMTS, GSM, Wi-Fi/WLAN, Bluetooth, mmWave, 5G, DSRC, or LTE Direct. In some aspects, processing module **24004** may utilize backhaul antenna system **24010** in accordance with a cellular radio access technology, which may provide longer transmission and reception range to enable distant communications with radio access infrastructure **24016**. In some aspects, processing module **24004** may utilize backhaul antenna system **24010** in accordance with a satellite radio access technology, which may provide even longer transmission and reception ranges than terrestrial radio access technologies (e.g., cellular and short-range radio access technologies).

Although depicted as a terrestrial network access node in FIG. **240**, in some aspects radio access infrastructure **24016** may be an orbital satellite (e.g., a satellite-based radio access infrastructure) that can relay signals between mobile infrastructure **24002** and an associated communication network. In some aspects, mobile infrastructure node **24002** may communicate with radio access infrastructure **24016** according to V2N or V2I communications.

In some aspects, processing module **24004** may also transmit and receive signals with fronthaul antenna system **24012**, which may include one or more antennas that mobile infrastructure node **24002** can utilize to transmit and receive signals with proximate terminal devices, such as one or more of terminal devices **24018-24024**. Accordingly, in some aspects, mobile infrastructure node **24002** may utilize fronthaul antenna system **24012** as a fronthaul connection to provide a local radio access network in an area around mobile infrastructure node **24002**. Processing module **24004** may utilize fronthaul antenna system **24012** in accordance with any radio access technology, such as, without limitation, LTE, UMTS, GSM, Wi-Fi/WLAN, Bluetooth, mmWave, 5G, DSRC, or LTE Direct. In some aspects, processing module **24004** may utilize fronthaul antenna system **24012** in accordance with a short-range radio access technology or a small-cell version of a cellular radio access technology (e.g., a 3GPP femtocell). In some aspects, mobile infrastructure node **24002** may communicate with terminal devices **24018-24024** according to V2V or D2D communications. In some aspects, mobile infrastructure node **24002** may utilize massive MIMO and/or point-to-multipoint communications to transmit and receive data with terminal devices **24018-24024**.

In some aspects, memory **24006** may be a memory component. In some aspects, memory **24006** can function as a server to store data from proximate terminal devices, such as one or more of terminal devices **24018-24024** in the exemplary setting of FIG. **240**. Camera **24008** may be a video or image camera that processing module **24004** can use for autonomous driving, positioning of mobile infrastructure node **24002,** emergency scenario surveillance and monitoring, etc. Mobile infrastructure node **24002** may also include one or more other sensors or peripheral devices, such as GPS positioning components, audio input/output devices, radar sensors, etc., that processing module **24004** may utilize to observe the local environment of mobile infrastructure node **24002**.

In some aspects, power supply **24014** may be a battery that provides power to the components of mobile infrastructure node **24002**. In some aspects, power supply **24014** may recharge in the manner of a car battery. In some aspects, power supply **24014** may be configured for solar recharging, and may be connected with solar panels mounted on mobile infrastructure node **24002** (not explicitly shown in FIG. **240**).

Mobile infrastructure node **24002** may therefore receive downlink communications intended for one or more of terminal devices **24018-24024** from radio access infrastructure **24016** (via backhaul antenna system **24010**) and relay the downlink communications to terminal devices **24018-24024** (via fronthaul antenna system **24012**). Mobile infrastructure node **24002** may receive uplink communications intended for radio access infrastructure **24016** from one or more of terminal devices **24018-24014** (via fronthaul antenna system **24012**) and relay the uplink communications to radio access infrastructure **24016** (via backhaul antenna system **24010**). Mobile infrastructure node **24002** may provide a local radio access network via fronthaul antenna system **24012** and act as a gateway to provide network connectivity to proximate terminal devices **24018-24024.**

As mobile infrastructure node **24002** may be implemented in the framework of a vehicle, mobile infrastructure node **24002** may have superior transmission and reception capabilities than terminal devices **24018-24024**. Accordingly, even if terminal devices **24018-24024** are not within range of a radio access connection, mobile infrastructure node **24002** may provide network connectivity to terminal devices **24018-24024** via radio access infrastructure **24016**. Accordingly, while in certain scenarios radio access infrastructure **24016** may be out of the range of one or more of terminal devices **24018-24024**, mobile infrastructure node **24002** may provide an interface between terminal devices **24018-24024** and radio access infrastructure **24016**.

In some aspects, mobile infrastructure node **24002** may have higher sensing, higher storage (e.g., at memory **24006**), higher processing (e.g., at processing module **24004**), higher power (e.g., at power supply **24014**), higher transmission power (e.g., at backhaul antenna system **24010** and any radio amplification module of processing module **24004**), and/or larger/more antennas (e.g., at backhaul antenna system **24010** and fronthaul antenna system **24012)** than one or more of terminal devices **24018-24024**. Mobile infrastructure node **24002** may rely on these capabilities to provide network connectivity to terminal devices that otherwise would not have network connectivity.

In some aspects, mobile infrastructure node **24002** can be deployed in critical network scenarios. Non-limiting examples of critical network scenarios can include emergency or natural disaster scenarios where local infrastructure for a radio access network has been damaged or is not operational, network overloading scenarios where the radio access network or is overly congested, or general network malfunction or maintenance scenarios where the radio access network and/or core network is not fully operational.

In some aspects, a critical network scenario may be focused in a geographic area. For example, mobile infrastructure node **24002** may move to the affected area and provide network connectivity to nearby terminal devices via the backhaul connection with radio access infrastructure **24016**, which may be out of range of the nearby terminal devices but remain within range of mobile infrastructure node **24002** due to the increased transmission and reception capacities of mobile infrastructure node **24002**.

In some aspects, mobile infrastructure node **24002** may collaborate with other mobile infrastructure nodes to provide network connectivity to a large affected area, for example, where each mobile infrastructure node covers a different subset of the affected area and coordinates with one another directly or via central coordination by a central coordinating entity.

In some aspects, mobile infrastructure node **24002** may operate during some time periods as a vehicle, for example, for unofficial use (e.g., private or commercial use not directly related to the mobile infrastructure functions), and may not actively provide mobile infrastructure functions to nearby terminal devices. Mobile infrastructure node **24002** may then dynamically activate the mobile infrastructure functions on demand, and therefore transition from unofficial use to active use as a mobile infrastructure node.

Accordingly, if a critical network scenario occurs, mobile infrastructure node **24002** may activate the mobile infrastructure functions and begin offering its services to nearby terminal devices. In some aspects, mobile infrastructure node **24002** may relocate to the affected area of the critical network scenario, such as under the control of a driver or autonomously (e.g., via autonomous driving functionality).

In some aspects, mobile infrastructure node **24002** may dynamically activate the mobile infrastructure functions in accordance with a network configuration protocol, which may be an end-to-end self-organizing or automatic protocol. For example, in accordance with the network configuration protocol, mobile infrastructure node **24002** may communicate with a central coordinating entity for mobile infrastructure functions (that may be in the underlying core network or may be an external network, e.g., interfacing with radio access infrastructure **24016)** in order to configure the backhaul link between mobile infrastructure node **24002** and the core network (via radio access infrastructure **24016)** and arrange any other capabilities related to the mobile infrastructure functions. The core network may also verify mobile infrastructure node **24002** and provide instructions. Mobile infrastructure node **24002** may then activate the mobile infrastructure functions in accordance with the core network interaction and begin serving nearby terminal devices.

After activating mobile infrastructure functions, in some aspects mobile infrastructure node **24002** may advertise its capabilities to nearby terminal devices, such as by broadcasting beacon signals via fronthaul antenna system **24012**. Nearby terminal devices, in particular nearby terminal devices that are currently searching for available radio access connections, may then discover and connect to mobile infrastructure node **24002**.

As previously indicated, nearby terminal devices such as terminal devices **24018-24024** may then utilize mobile infrastructure node **24002** to obtain a connection to a radio access or core network, for example, network connectivity, which mobile infrastructure node **24002** may provide in the form of a radio connection through radio access infrastructure **24016**.

In addition to network connectivity, in some aspects, mobile infrastructure node **24002** may also provide other mobile infrastructure functions such as, without limitation, cloud computing (including Mobile Edge Computing (MEC)), cloud storage, video or image processing, and traffic management. For example, one or more nearby terminal devices may offload (via fronthaul antenna system **24012**) processing tasks to mobile infrastructure node **24002**, which mobile infrastructure node **24002** may then perform at processing module **24004** (e.g., in accordance with cloud computing principles) and provide any processing results back to the corresponding terminal devices.

In some aspects mobile infrastructure node **24002** may receive data from one or more nearby terminal devices and store the data locally at memory **24006**. Mobile infrastructure node **24002** may then provide the data on request back to the corresponding terminal devices.

In some aspects, processing module **24004** may perform video or image processing on video or image data provided by camera **24008**, such as in order to perform surveillance, monitor an emergency or disaster scenario, or other processing functions.

In some aspects, processing module **24004** may also perform traffic management, such as by using video or image data provided by camera **24008** and/or realtime traffic data (e.g., crowdsourced or provided by a central coordinating entity) to direct and manage traffic in the vicinity of mobile infrastructure node **24002**.

The ability to dynamically activate and deactivate mobile infrastructure functions at mobile infrastructure node **24002** may be a particularly advantageous feature. For example, a user (or driver) may utilize mobile infrastructure node **24002** as a vehicle during certain periods, for example, for unofficial use, during which the mobile infrastructure functions may not be active. However, in the event of a critical network scenario, the mobile infrastructure functions of mobile infrastructure node **24002** may be activated, thus transitioning mobile infrastructure node **24002** from unofficial to active use.

In some aspects, the mobile infrastructure functions may be activated by user input, such as when the user of mobile infrastructure node **24002** detects a critical network scenario and activates the mobile infrastructure functions (e.g., via a user input component that interfaces with processing module **24004** such as, without limitation, a button, switch, voice, command interface, touchpad, or touch display). Additionally or alternatively, in some aspects mobile infrastructure node **24002** may be configured to autonomously activate the mobile infrastructure functions. For example, processing module **24004** may detect a service outage (e.g., due to lack of radio coverage) during monitoring of a radio environment around mobile infrastructure node **24002** and activate the mobile infrastructure functions. Additionally or alternatively, in some aspects, mobile infrastructure node **24002** may receive a notification from a central coordinating entity (e.g., over the backhaul connection provided by backhaul antenna system **24010**) that instructs mobile infrastructure node **24002** to activate mobile infrastructure functions.

Upon activation, mobile infrastructure node **24002** may initiate a network configuration protocol with a central coordinating entity for mobile infrastructure functions, which may be, for example, a core network entity, government-managed emergency control center, or other type of central control system. Mobile infrastructure node **24002** may indicate its current location and mobile infrastructure capabilities (e.g., backhaul capabilities of backhaul antenna system **24010**, fronthaul capabilities of fronthaul antenna system **24012**, cloud computing capabilities of processing module **24004**, and/or storage capabilities of memory **24006**) to the central coordinating entity.

Processing module **24004** may then communicate with the central coordinating entity to verify mobile infrastructure node **24002** for provision of mobile infrastructure functions (which may include authentication and/or security verification mechanisms) and/or to select certain capabilities of mobile infrastructure node **24002** that mobile infrastructure node **24002** should provide as mobile infrastructure functions to nearby terminal devices. In some aspects, processing module **24004** may communicate with the central coordinating entity to set up an end-to-end network connection to provide full network connectivity from mobile infrastructure node **24002** to an underlying core network.

In some aspects, processing module **24004** may communicate with the central coordinating entity to identify a radio access infrastructure for mobile infrastructure node **24002** to interface with via backhaul antenna system **24010**, such as radio access infrastructure **24016**. Alternatively, in some aspects, backhaul antenna system **24010** may perform a radio scan to identify a radio access infrastructure to connect to, such as radio access infrastructure **24016**.

In some aspects, the central coordinating entity may provide directions or instructions for serving a specific area, such as an area affected by the critical network scenario. If mobile infrastructure node **21702** is operated by a driver, the driver may be prompted to drive mobile infrastructure node **24002** to the specific area and follow any additional instructions. If mobile infrastructure node **24002** is an autonomous vehicle, processing module **24004** may interface with an autonomous driving system of mobile infrastructure node **24002** in order to control and drive mobile infrastructure node **24002** to the specific area and follow any further instructions provided by the central coordinating entity.

FIG. **241** shows an example in accordance with some aspects in which mobile infrastructure node **24002** includes autonomous driving system **24102**. The autonomous driving system **24102** may be an electronics system that interfaces with the engine, steering, and/or electronics framework of mobile infrastructure node **24002** to autonomously drive mobile infrastructure node **24002**. In some aspects, autonomous driving system **24102** may be a computer configured to perform offline or online autonomous driving of mobile infrastructure node **24002**. Accordingly, processing module **24004** may interact with autonomous driving system **24102** to control mobile infrastructure node **24002** to drive to various locations, such as an area affected by a critical network scenario.

In some aspects, processing module **24006** may receive a location, for example, via user input or by a central coordinating entity, and may interface with autonomous driving system **24102** to control mobile infrastructure node **24002** to travel to the location. Processing module **24006** may then activate mobile infrastructure functions at or around the location.

As previously indicated, in some aspects, backhaul antenna system **24010** may be configured for satellite communications, and may communicate with a satellite-based radio access infrastructure **24016** to maintain connectivity and provide network connectivity to nearby terminal devices via satellite-based radio access infrastructure **24016**.

In some aspects, mobile infrastructure node **24002** may coordinate with other mobile infrastructure nodes to provide network connectivity to a large area affected by a critical network scenario. Accordingly, mobile infrastructure node **24002** may act in concert with one or more other mobile infrastructure nodes to provide network connectivity across an affected area, where each mobile infrastructure node (or multiple mobile infrastructure nodes) may serve a subset of the affected area. In some aspects, the coordination between multiple mobile infrastructure nodes may be managed by a central coordinating entity. In some aspects, the coordination between multiple mobile infrastructure nodes may be managed in a distributed manner, such as where processing module **24004** may communicate with other mobile infrastructure nodes via backhaul antenna system **24010** to coordinate the positioning and services offered by the mobile infrastructure nodes across the affected area.

Accordingly, some aspects can provide a method of enabling vehicles or drones as a mobile infrastructure node, for example, mobile infrastructure node **24002**. Vehicles (e.g., cars, trains, buses, airplanes) and drones can be mobile platforms with a large capacity for sensing, storing, or processing. Depending upon the configuration, vehicle and drones may have a local power source, or derive power from an external source, such as solar energy. Taken together, these characteristics can offer a platform to dynamically provide infrastructure or gateway functions to nearby terminal devices. This may be particularly useful in situations where infrastructure is unavailable, such as in critical network scenarios including emergency or natural disaster scenarios where local infrastructure for a radio access network has been damaged or is not operational, network overloading scenarios where the radio access network or is overly congested, or general network malfunction or maintenance scenarios where the radio access network and/or core network is not fully operational.

Accordingly, a vehicle or drone may be configured as a mobile infrastructure node, such as mobile infrastructure node **24002**, which may be configured to offer network connectivity to nearby terminal devices (e.g., terminal devices **24018-24024**) in addition to a variety of other mobile infrastructure functions such as cloud computing and storage.

In some aspects, self-organizing end-to-end protocols may permit dynamic configuration of a vehicle or drone as a mobile infrastructure node, and accordingly mobile infrastructure node **24002** can be configured to both operate as a normal vehicle (e.g., for unofficial use unrelated to mobile infrastructure functions) and as a dedicated platform for providing mobile infrastructure functions. The mobility and available equipment of mobile infrastructure nodes may thus provide an on-demand and cost-efficient deployment of mobile infrastructure functions on an as-needed basis. Furthermore, these resources can also enable on-demand bolstering of infrastructure resources as-needed, such as during network congestion or periods of network unavailability.

To achieve mobile infrastructure deployment, one or more vehicles or drones can be designated as a mobile infrastructure node. This can be achieved via centralized control or on an ad hoc selection basis. Appropriate signaling, authentication, and security mechanisms can be employed for communication between mobile infrastructure nodes and nearby terminal devices (e.g., fronthaul links) and/or for communication between the mobile infrastructure node and radio access infrastructure (e.g., backhaul links).

The designation of the mobile infrastructure node, like the increase or decrease of a mobile node network, permits dynamic service creation, where said service creation can bolster existing resources or permit connectivity in areas of network unavailability. Examples of such network unavailability may include areas of poor network coverage, disasters, or areas of network overload, such as sporting events or concerts. For example, mobile infrastructure node 24002 can provide mobile infrastructure functions to a local area on an on-demand basis to increase local radio access resources and/or provide network connectivity in areas where service is sparse or non-existent.

In some aspects, an existing mobile infrastructure node, or an existing mobile infrastructure node network (e.g., a network of multiple mobile infrastructure nodes that act in concert), may create, issue, or broadcast advertisements for the mobile infrastructure node or mobile infrastructure node network. This may permit or encourage use of the mobile infrastructure node or mobile infrastructure node network by nearby terminal devices, such as terminal devices **24018-24024**.

Mobile infrastructure node **24002** may communicate wirelessly via extensions of known and unknown communication protocols, including, but not limited to V2V, V2I, and single cell point-to-multipoint (SC-PTM). Existing protocols for licensed and unlicensed bands may be defined. Wireless communication may be performed on licensed frequency bands or unlicensed frequency bands.

In some aspects, mobile infrastructure node **24002** node may be assigned to constantly provide mobile infrastructure functions (e.g., may be assigned for continuous active use). Alternatively, in some aspects mobile infrastructure node **24002** may be to provide mobile infrastructure functions during some time periods (active use) and may not provide mobile infrastructure functions during other time periods (unofficial use). In other words, mobile infrastructure node **24002**, may be assigned for intermittent active use. In some aspects, where mobile infrastructure node **24002**is assigned for intermittent active use, mobile infrastructure node **24002** may deactivate components that are dedicated for mobile infrastructure functions when not in active use, which may reduce power consumption.

In some aspects, mobile infrastructure node **24002** may deactivate completely when not in active use and may completely shut off power. This may be triggered independently at mobile infrastructure node **24002**, or by a radio access network or other centralized control source such as a central coordinating entity for mobile infrastructure functions. The centralized control source may employ an algorithm for powering on or powering off mobile infrastructure node **24002**.

In some aspects, one or more mobile infrastructure nodes may be deployed based on machine calculated allocation of resources, which may be executed by a central coordinating entity. This machine calculation may respond to current, identified needs, or to predicted needs. Prediction may be based on a variety of factors including historical networking needs, historical networking disturbances, future scheduled events, and future unscheduled predicted events, such as natural disasters. In light of these factors, the location and magnitude of the desired mobile data network required may be calculated, and a corresponding allotment of mobile infrastructure nodes may be deployed to the necessary area.

For example, a central coordinating entity for mobile infrastructure functions may be implemented as a central server, for example, as part of the core network or an external network. The central coordinating entity may evaluate needs of the radio access network, such as, without limitation, which geographical areas are (or will be or have been) experiencing poor or no service, which geographic areas are highly congested, which geographic areas are affected by a disaster or emergency, which geographic areas have a high number of users. The central coordinating entity may then evaluate which geographic areas are in most need of extra radio access resources in the form of mobile infrastructure nodes.

In some aspects, mobile infrastructure node **24002** may utilize massive MIMO techniques to transmit and receive communications with terminal devices and/or radio access infrastructure.

In some aspects, mobile infrastructure node **24002** may be utilized for any suitable networking function, including and in addition to the provision of radio access resources. For example, mobile infrastructure node **24002** may provide functions including, but not limited to, cloud connectivity, storage for sensed data, mobile edge computing for analytics, video processing, and/or traffic management.

In some aspects, mobile infrastructure node **24002** may be deployed or expanded in accordance with several different procedures. For example, in some scenarios a mobile infrastructure node **24002** may be deployed to a specific area of need for a network, such as when mobile infrastructure node **24002** is relocated to a specific area upon request. Alternatively, in some scenarios mobile infrastructure node **24002** may already be located within the area of need, and can be incorporated into the network on demand.

In some aspects, mobile infrastructure node **24002** may not currently be active, for example, may be in the area but may not be actively providing mobile infrastructure functions. Mobile infrastructure node **24002** may then activate the mobile infrastructure functions upon request from the network, and thus incorporate the mobile infrastructure functions as part of the network. Accordingly, in some aspects, the network or a central coordinating entity may identify vehicles or drones eligible for mobile infrastructure node operation within an area of need, designating the vehicles or drones as a mobile infrastructure node, and incorporating them within the network.

According to various aspects, mobile infrastructure node **24002** may be any object that is capable of self-locomotion, remote-controlled locomotion, or being driven. Without limitation, this may include an automobile, an all-terrain vehicle, a motorcycle, a truck, a tractor-trailer, a drone, a helicopter, a balloon, or any other similar object.

In some aspects, mobile infrastructure node **24002** may be designed to serve as mobile infrastructure to provide network connectivity to a surrounding area. Mobile infrastructure node **24002** may perform functions of cloud storage, storage for sensed data, mobile edge computing for analytics, video processing, traffic management, operation as a network access node, operation as a gateway, operation as a cloud storage node, or operation as a computer server.

In some aspects, mobile infrastructure node **24002** may be identified for inclusion in a wireless network based on a need of the wireless network. Without limitation, such needs may include location of mobile infrastructure node **24002,** service capability of mobile infrastructure node **24002,** availability of mobile infrastructure node **24002,** or computing resources of mobile infrastructure node **24002**. In some aspects, mobile infrastructure node **24002** may be identified via an Anycast method, such as an Anycast method pursuant to 3GPP Technical Report (TR) 23.785.

In some aspects, mobile infrastructure node **24002** may be deployed to general areas or specific locations to meet a network need. The network need may be acute or chronic, e.g., may take place over a short duration of time (e.g., seconds, minutes, hours days) or may take place over a longer duration of time (e.g., weeks, months, years). The network need may be current or anticipated. Without limitation, examples of current needs include faulty, broken, defective, or inoperable network equipment, network overload, or large gatherings such as in concerts or sporting events. Without limitation, examples of anticipated needs include predicted faulty, broken, defective, or inoperable equipment, such as in a natural disaster, or planned events, concerts, sports games, parades, or other events where large numbers of mobile network users are anticipated. In addition, and separate from an acute event, mobile infrastructure node **24002** may be deployed to specific areas to bolster existing networks where the growth of use has caused demand to near or exceed capacity.

In some aspects, the network may control the power supply of mobile infrastructure node **24002**. For example, in some aspects where mobile infrastructure node **24002** consents to participation in the network, the network may control the power usage of mobile infrastructure node **24002** for its provision of mobile infrastructure functions. This may provide increased efficiency by decreasing power usage when mobile infrastructure node **24002** is not actively being used, for example, when the mobile infrastructure functions, e.g., when mobile infrastructure node **24002** is not expected to provide mobile infrastructure functions to nearby terminal devices. It may, for example, be desirable to instruct mobile infrastructure node **24002** to travel to a site for mobile network transmission. In this case, the network could deactivate or simply leave the mobile infrastructure functions of mobile infrastructure node **24002** inactive until they are needed.

In some aspects, the communication between the network, e.g., a central coordinating entity, and mobile infrastructure node **24002** can occur on a licensed wireless band or an unlicensed wireless band. The communication may occur on multiple bands, wherein all are licensed, all are unlicensed, or the bands are a mixture of licensed and unlicensed.

Some of the current aspects can provide a method of a mobile infrastructure node operating within a dynamic mobile infrastructure including receiving an invitation for inclusion in a wireless network, accepting the invitation for inclusion in a wireless network, establishing a wireless connection with wireless network receiving data from the wireless network, and performing a wireless network function using the received data.

FIG. **242** shows method **24200** of activating a mobile infrastructure node as a dynamic mobile infrastructure in accordance with some aspects. As shown in FIG. **242**, method **24200** includes identifying a mobile infrastructure node for inclusion in a wireless network **(24210**), establishing a wireless connection with the mobile infrastructure node **(24220),** joining the mobile infrastructure node to the wireless network (**24230**), determining a network function of the mobile infrastructure node within the wireless network (**24240**), and configuring the mobile infrastructure node to perform the determined function (**24250**).

FIG. **243** shows method **24300** of operating a mobile infrastructure node in accordance with some aspects. As shown in FIG. **243**, method **24300** includes establishing a wireless connection with wireless network (**24310**), accepting an invitation for inclusion in a wireless network (**24320**), joining a wireless network as a mobile infrastructure node (**24330**), and performing a designated wireless network function (**24340**).

FIG. **244** shows method **24400** of operating a vehicle as a mobile infrastructure node in accordance with some aspects. As shown in FIG. **236**, method **24400** includes detecting network outage or network overload in a geographic area at processing module of the vehicle (**24410**), and activating a fronthaul antenna system and a backhaul antenna system of the vehicle to provide network connectivity to one or more terminal devices connected to the fronthaul antenna system via a backhaul connection, provided by the backhaul antenna system, with radio access infrastructure located outside of the geographic area (**24420**).

7.4 Hierarchical Communication #4

In some aspects of this disclosure, a mobile infrastructure node may detect a potential critical network scenario and notify an emergency network management server of the potential critical network scenario. The emergency network management server may then verify whether the potential critical network scenario is an isolated event or a critical network scenario and, if the potential critical network scenario is a critical network scenario, subsequently select and instruct one or more mobile infrastructure nodes to provide network connectivity to the affected area.

For example, mobile infrastructure nodes may be particularly advantageous in emergency and disaster scenarios. For example, major disasters may destroy cellular communications infrastructure such as base stations, thus leaving large affected areas without network connectivity. However, vehicles such as cars and trucks may still contain operational communication systems that have backhaul and infrastructure mode capabilities, which may be mechanically protected by strong car body and chassis and supplied by the car battery. These communication systems may avoid the critical damage that can cripple radio access infrastructure, and accordingly may be configured as infrastructure nodes to provide network connectivity to users and terminal devices.

FIG. **245** shows an exemplary scenario in accordance with some aspects. In the exemplary setting of FIG. **245**, there may be a disaster or emergency scenario that disables the local radio access infrastructure, such as network access nodes **24516** and **24518** (which may be, e.g., base stations of a cellular radio access network, access points of a widespread WLAN/Wi-Fi connected area, or another type of radio access infrastructure that offers network connectivity to terminal devices). The disaster or emergency scenario may damage the physical structure of network access nodes **24516** and **24518** and/or damage backhaul links or core network components that support network access nodes **24516** and **24518** and, accordingly, network access nodes **24516** and **24518** may not be able to provide a radio access network to proximate terminal devices. As a result, proximate terminal devices such as terminal devices **24520**, **24522**, and **24524** may lose network connectivity and users may not be able to place calls, receive data, access the internet, etc.

However, mobile infrastructure node **24502** may restore network connectivity to terminal devices **24520-24524** via operational fronthaul and backhaul connections. As shown in FIG. **245**, mobile infrastructure node **24502** may include processing module **24504**, primary antenna system **24506**, backhaul antenna system **24508**, and fronthaul antenna system **24510**. Although shown as being external to the frame of mobile infrastructure node **24502** in the exemplary setting of FIG. **245**, one or more of primary antenna system **24506**, backhaul antenna system **24508**, and fronthaul antenna system **24510** may be integrated within mobile infrastructure node **24502** and may in some aspects be protected from external damage by the external frame/chassis of mobile infrastructure node **24502**.

Accordingly, mobile infrastructure node **24502** may provide a local radio access network via fronthaul antenna system **24510** to area **24512** surrounding mobile infrastructure node **24502**. Terminal devices within area **24512** such as terminal devices **24520-24524** may therefore be able to connect to mobile infrastructure node **24502** via the local radio access network. Mobile infrastructure node **24502** may then provide network connectivity via a backhaul connection through backhaul antenna system **24508**, which may interface with core/internet network **24528** via radio access infrastructure **24514**.

As shown in FIG. **245**, in some aspects radio access infrastructure **24514** may be a satellite-based radio access infrastructure and backhaul antenna system **24508** may be a satellite communication antenna system. In other aspects, radio access infrastructure **24514** may be a terrestrial radio access infrastructure (such as in the manner of radio access infrastructure **24016** as previously detailed regarding FIG. **240**) that is located outside of the area affected by the disaster or emergency scenario. Regardless, radio access infrastructure **24514** may be operable and within range of backhaul antenna system **24508**, which may offer a radio transmission and reception range that is substantially further than terminal devices **24520-24524** that lack network connectivity due to the local radio access infrastructure outage.

As shown in FIG. **245**, radio access infrastructure **24514** may interface with core/internet network **24528,** which may be a satellite-to-terrestrial radio interface or a terrestrial radio or wired interface. Mobile infrastructure node **24502** may accordingly provide network connectivity to proximate terminal devices within the local radio network provided by fronthaul antenna system **24510** (in area **24512**) through the backhaul connection provided by backhaul antenna connection **24508**. Radio access infrastructure **24514** may route uplink and downlink data between mobile infrastructure node **24502** and core/internet network **24528,** thus completing the network connectivity link between the local radio access network of mobile infrastructure node **24502** and core/internet network **24528**.

As previously detailed regarding core network **21902** in FIG. **219**, core/internet network **24528** may include a core network (supporting a radio access network, which may be the same core network supporting network access nodes **24516** and **24518**) and internet-connected network that supports a radio access network and external network. Core/internet network **24528** may provide a full range of network connectivity services to mobile infrastructure node **24502** and any terminal devices connected to mobile infrastructure node **24502**.

FIG. **246** shows an exemplary internal configuration of processing module **24504** in accordance with some aspects. As shown in FIG. **245**, processing module **24504** may include emergency network management client module **24602**, power management module **24604**, geopositioning system **24606**, baseband modem **24608**, backhaul modem **24610**, and fronthaul modem **24612**. In some aspects, emergency network management client module **24602** may be an application-layer processor (such as an application processor in the manner of application processor **21712** as previously detailed in FIG. **217**) configured to execute program code (retrieved from a non-transitory computer readable medium) and execute an emergency network management client application.

As shown in FIG. **246**, emergency network management client module **24602** may communicate on a logical software-level connection (defined by a specific protocol for the connection between emergency network management client module **24602** and emergency network management server **24614**) with emergency network management server **24614**, which may be a server processor configured to execute an emergency network management server application as a counterpart application to the emergency network management client application. In some aspects, emergency network management server **24614** may be located in a core network section or internet-connected network section of core/internet network **24528,** such as a server located in a core network or an internet-connected server.

Power management module **24604** may interface with a power supply of mobile infrastructure node **24502**, which may be, for example, a car battery or other large power supply integrated into mobile infrastructure node **24502**. Power management module **24604** may monitor the remaining battery power of the power supply and provide battery life information to emergency network management client module **24602**. In some aspects, power management module **24604** may also have access to emergency self-start functionality of mobile infrastructure node **24502** (e.g., in the manner of keyless ignition or any vehicular start operation that does not require keys) and can start mobile infrastructure done **24502** to charge the power supply of mobile infrastructure node **24502** (e.g., a car battery). This may be important to cause processing module **21800** and the fronthaul and backhaul systems to have sufficient power to operate without risk of battery depletion. In some aspects, power management module **24604** may decide when to start and/or turn-off mobile infrastructure node **24502** via the self-start functionality depending on fuel availability, e.g., the amount of gasoline left in the tank, during critical network scenarios. For example, if power management module **24604** determines that there is sufficient fuel and a demand for recharging, power management **24604** may start mobile infrastructure node **24502** via the self-start functionality. However, if power management module **24604** determines that there is insufficient fuel, power management **24604** may not start mobile infrastructure node **24502** via the self-start functionality (or may turn off mobile infrastructure node **24502** if there is a risk of fuel depletion).

Geopositioning system **24606** may be a satellite-based or other long-distance geopositioning system such as a Global Navigation Satellite System (GNSS) system (e.g., a Global Positioning System (GPS) system, a Global Navigation Satellite System (GLONASS) system, a Galileo system, or a Beidou system). Geopositioning system **24606** may provide positioning information of mobile infrastructure node **24502** to emergency network management client module **24602**.

Baseband modem **24608**, backhaul modem **24610**, and fronthaul modem **24612** may be communication modems including hardware-defined modules (e.g., one or more hardware accelerators and/or other dedicated hardware circuitry) and/or software-defined modules (e.g., one or more processors) configured to control and execute radio communication functionality (e.g., similar to the manner previously detailed regarding baseband modem **21706** in FIG. **217**). Baseband modem **24608** may interface with primary antenna system **24506** to transmit and receive radio signals according to a cellular or short-range radio access technology.

Baseband modem **24608** may communicate with network access nodes **24516** or **24518** (when operational). Backhaul modem **24610** may interface with backhaul antenna system **24508** and may transmit and receive signals with radio access infrastructure **24514** according to a backhaul radio access technology, such as a satellite radio access technology or other long-range radio access technology.

Fronthaul modem **24612** may interface with fronthaul antenna system **24510** to transmit and receive signals over a local radio access network, such as to communicate with proximate terminal devices **24520**, **24522**, and **24524**. In some aspects, fronthaul modem **24612** may provide a 'hotspot' connection to the local radio access network, such as in the manner of a cellular small cell (e.g., a 3GPP femtocell) or short-range access point (e.g., a Wi-Fi/WLAN access point).

In some aspects, some vehicles can be pre-equipped with cellular communication technology (e.g., for a connected car system that interfaces with a cellular network) and/or hotspot functionality (e.g., a Wi-Fi/WLAN hotspot). Accordingly, in some aspects baseband modem **24608,** primary antenna system **24506**, fronthaul modem **24608,** and fronthaul antenna system **24510** may be preinstalled and/or be features of the vehicle supporting mobile infrastructure **24502**. In some aspects, some vehicles that see current usage by drivers come pre-equipped with geopositioning technology. Accordingly, in some aspects, geopositioning system **24606** may be preinstalled and/or standard feature of the vehicle.

In accordance with some aspects, mobile infrastructure node **24502** may detect critical network scenarios (e.g., disaster or emergency scenarios when radio access infrastructure is damaged or crippled, network outages due to maintenance, network overload conditions, and other scenarios that cripple network connectivity). Mobile infrastructure node **24502** may then operate to restore network connectivity to areas affected by the critical network scenario by providing an interface to the underlying core network via backhaul antenna system **24508** and radio access infrastructure **24514**. As backhaul antenna system **24508** may provide a robust, long-range radio connection, backhaul antenna system **24508** may be able to transmit and receive signals with radio access infrastructure **24514** from within the affected area and thus remain operational even in the face of local radio access infrastructure failure.

FIG. **247** shows message sequence chart **24700** in accordance with some aspects. As shown in FIG. **247**, mobile infrastructure node **24502** may detect a potential critical network scenario in **24702**. In particular, mobile infrastructure node **24502** may rely on baseband modem **24608** and primary antenna system **24506** to detect potential critical network scenarios.

For example, baseband modem **24608** may provide a cellular and/or short-range radio access connection, for example, to provide the vehicle of mobile infrastructure node **24502** with network connectivity, and accordingly may maintain a radio access connection in a substantially continuous manner.

In some aspects, baseband modem **24608** may provide 'always-on' functionality, and may be configured to maintain a radio access connection (e.g., in either a radio idle or radio connected state) on a constant basis. Accordingly, baseband modem **24608** may detect when there is irregular network activity that is indicative of a critical network scenario. For example, in some aspects baseband modem **24608** may be configured to detect an out-of-service (OOS) situation in which baseband modem **24608** does not have network connectivity (e.g., that no radio access and/or core network connection is available). Baseband modem **24608** may detect OOS situations via one or more mechanisms. For example, the baseband modem **24608** can be configured to detect the OOS situation by detecting a loss of a connection to a serving cell (e.g., abruptly), by detecting a performance of a cell scan procedure (e.g., a PLMN scan) that does not return any detected cells, by detecting one or more cells during a cell scan but is not able to acquire system information (e.g., MIB, SIB1, and SIB2). Additionally or alternatively, in some aspects baseband modem **24608** may be configured to detect substantial network load, such as when a radio access connection is abnormally slow or unreactive. Additionally or alternatively, in some aspects baseband modem **24608** may first reset or restart if an OOS situation is detected and, after resetting/restarting, check again to determine if the OOS situation was actual or not. This may prevent 'false positive' OOS situations in which a bug at baseband modem **24608** may incorrectly cause baseband modem **24608** to detect an OOS situation, and may avoid unwanted singling involved in inaccurately reporting a potential critical network scenario. If baseband modem **24608** still detects an OOS situation after resetting/restarting, baseband modem **24518** may then notify emergency network management client module **24602** of the OOS situation.

Additionally or alternatively, in some aspects mobile infrastructure node **24502** may check for end-to-end network failure (e.g., failure beyond the radio access failures noted above such as OOS). For example, 'keep-alive' or 'heartbeat' mechanisms can be commonly used to maintain end-to-end connectivity from device to servers. Accordingly, emergency network management client module **24602** may be configured to perform a keep-alive procedure in order to periodically check whether end-to-end connectivity is still available. For example, emergency network management client module **24602** may periodically (e.g., every few minutes) check if there is any new information from emergency network management server **24614**. Additionally or alternatively, emergency network management server **24614** may be configured to periodically send small amounts of data (e.g., a TCP NACK) to emergency network management client module **24602**, which may keep open the end-to-end connection and prevent connection timeout (e.g., Packet Data Protocol (PDP) idle timeout in 3GPP networks). If no data passes through on the connection during a certain period, the network operator may close the connection (e.g., PDP Context Idle Timeout may be operator-defined and between 10 minutes and 24 hours; some network operators do not allow polling/pinging at a periodicity greater than every 60 seconds). Emergency network management client module **24602** may therefore periodically check whether the end-to-end connection is still active and detect end-to-end network failure accordingly. In some aspects, other user-plane applications running on an application processor of mobile infrastructure node **24502** (which may be the same or different from an application processor corresponding to emergency network management client module **24602**) may notify emergency network management client module **24602** of the potential critical network scenario.

Upon being notified of a potential critical network scenario, emergency network management client module **24602** may then establish a connection with emergency network management server **24614**. As network connectivity at baseband modem **24608** and primary antenna system **24506** is unavailable, emergency network management client module **24602** may establish the connection with emergency network management server **24614** via a backhaul connection provided by backhaul modem **24610** and backhaul antenna system **24508**. As previously indicated, the backhaul connection provided by backhaul modem **24610** and backhaul antenna system **24508** may be a robust, long-range connection that can transmit and receive signals to radio access infrastructure that is outside of the area affected by a critical network scenario (e.g., can transmit and receive signals at further distances than primary antenna system **24506**). Accordingly, emergency network management client module **24602** may utilize backhaul modem **24610** and backhaul antenna system **24508** as a fallback connection that does not depend on local radio access infrastructure.

Emergency network management client module **24602** may therefore establish a backhaul connection with radio access infrastructure **24514** via backhaul modem **24610** and backhaul antenna system **24508**. As previously detailed, in some aspects radio access infrastructure **24514** may be a satellite-based radio access infrastructure, and accordingly backhaul modem **24610** and backhaul antenna system **24508** may provide a satellite backhaul connection. Alternatively, in some aspects radio access infrastructure **24514** may be a terrestrial radio access infrastructure, and accordingly backhaul modem **24610** and backhaul antenna system **24508** may provide a long-range terrestrial connection. Radio access infrastructure **24514** may then interface with core/internet network **24528,** where emergency network management server **24614** may be located.

In some aspects, emergency network management server **24614** may be a regional or nationwide entity with a fixed, publicly-known IP address, which emergency network management client module **24602** may utilize to connect to emergency network management server **24614** via an internet connection. Emergency network management client module **24602** may therefore connect to emergency network management server **24614**.

Emergency network management client module **24602** may then prepare and transmit a notification message for emergency network management server **24614** in **24704** that details the potential critical network scenario. In some aspects, emergency network management client **24602** may collect capability and status information to include in the notification message, such as timestamp information (from a clock of geopositioning module **24606**), location information (from geopositioning module **24606**), relevant connection information from baseband modem **24608** that details the potential critical scenario as observed by baseband modem **24608**, remaining battery power information (from power management module **24604**), backhaul capability information (e.g., data rate and other information for backhaul modem **24610** and backhaul antenna system **24508**), and fronthaul capability information (from fronthaul modem **24612**; e.g., that details the capabilities of fronthaul modem **24612** and fronthaul antenna system **24510** in regards to providing a local radio access network/hotspot such as supported Wi-Fi features).

Emergency network management server **24614** may then evaluate the potential critical network scenario based on the notification message provided by emergency network management client module **24602** in **24706**. In particular, emergency network management server **24614** may evaluate the status information provided by emergency network management client module **24602** to determine whether the potential critical scenario is an isolated event or a critical network scenario.

For example, in some aspects emergency network management server **24614** may be configured to automatically distinguish between isolated and/or temporary network outages and errors (that may cause OOS or overload at a single terminal device and/or over an isolated area) and actual critical network scenarios (e.g., those caused by natural disasters, widespread power outages, substantial network overload, unexpected radio access and/or core network failures, maintenance, and other events that can cripple network connectivity).

In some aspects, emergency network management server **24614** may be configured to evaluate single notification messages, for example, received from one mobile infrastructure node. In some aspects, emergency network management server **24614** may be configured to receive notification messages from multiple emergency network management client modules of different mobile infrastructure nodes, such as where a large number or fleet of vehicles are outfitted as mobile infrastructure nodes in the manner of mobile infrastructure node **24502** and similarly configured to report potential critical network scenarios. Accordingly, if emergency network management server **24614** receives a large number of sudden notification messages from different mobile infrastructure nodes located in the same area (e.g., with similar timestamps and location information in the notification messages), emergency network management server **24614** may be configured to classify the potential critical network scenario as a critical network scenario.

In some aspects, emergency network management server **24614** may be configured to execute a machine learning technique (e.g., by retrieval and execution of corresponding program code) to evaluate the status information provided in the notification message(s) in order to classify the potential critical scenario as an isolated event or a critical network scenario. For example, the machine learning technique may apply a classification-based evaluation that considers the timestamps and location information to classify the potential critical scenario as an isolated event or a critical network scenario, such as based on appropriate thresholds that indicate a division between isolated events and critical network scenarios. For example, emergency network management server **24614** can interface with a database in which timestamps are logged together with location and status information, i.e. operational/not operational, for each network access node provided by regular network management & operations functions. Emergency network management server **24614** may store status and location information from emergency network management clients in the same database. These data sets and time series of historical and current status information may be used to train the machine learning algorithms. Non-limiting examples of machine learning algorithms that can be applied include Supervised machine learning algorithms such as support vector machines, artificial neural networks or hidden Markov models.

Emergency network management server **24614** may therefore classify the potential critical scenario as an isolated event (**24708**) or a critical network scenario (**24712**) based on the evaluation of **24706**, which may include evaluating only the notification message provided by emergency network management client module **24602** or evaluating the notification message provided by emergency network management client module **24602** and notification messages received from one or more other mobile infrastructure nodes. If emergency network management server **24614** classifies the potential critical scenario as an isolated event in **24708,** emergency network management server **24614** may notify emergency network management client module **24602** that the potential critical network scenario reported by emergency network management client module **24602** was an isolated event. Mobile infrastructure node **24502** may therefore continue without adjustment, and may wait out the network connectivity issues at baseband modem **24608**. Additionally or alternatively, in some aspects emergency network management client module **24602** may trigger baseband modem **24608** to reset or restart, which may eliminate the possibility of any bugs present in baseband modem **24608** that declares the out of service and could not recover from an OOS scenario for some duration.

Alternatively, if emergency network management server **24614** classifies the potential critical scenario as critical network scenario in **24712**, emergency network management server **24614** may decide to activate mobile infrastructure nodes in **24714**. Emergency network management server **24614** may select one or more mobile infrastructure nodes to activate, for example, one or more mobile infrastructure nodes that are expected to begin providing network connectivity to the area affected by the critical network scenario. As mobile infrastructure node **24502** reported the critical network scenario (and is thus local), emergency network management server **24614** may select mobile infrastructure node **24502** as one of the activated mobile infrastructure nodes (although this is not required). If emergency network management server **24614** received notification messages from multiple mobile infrastructure nodes that identified the critical network scenario, emergency network management server **24614** may also select one or more of the multiple infrastructure nodes to activate.

In some aspects, mobile infrastructure nodes may be expected to maintain a continuous or semi-continuous connection with emergency network management server **24614** (via a respective emergency network management client server protocol). For example, mobile infrastructure nodes may utilize network connectivity provided via always-on functionality of a baseband modem and primary antenna system to provide location updates to with emergency network management server **24614**. Accordingly, upon identifying a critical network scenario in **24712**, emergency network management server **24614** may be configured to identify one or more mobile infrastructure nodes proximate to the area affected by the critical network scenario (as indicated by the initial notification message) and select to activate the proximate mobile infrastructure nodes on the basis of their proximity to the area affected by the critical network scenario.

In some aspects, emergency network management server **24614** may consider the capability and status information provided by one or more mobile infrastructure nodes in selecting mobile infrastructure nodes to activate in **24714**. For example, in some aspects emergency network management server **24614** may apply an optimization technique (retrieved and executed as program code, such as a Pareto optimization technique or other optimizing techniques) that balances battery life with the capabilities (e.g., supported radio access technology/technologies, coverage range, number of supported terminal devices, capacity, etc.) of the fronthaul modem and fronthaul antenna system of the mobile infrastructure nodes.

Accordingly, as shown in FIG. **247**, emergency network management server **24614** may select to activate mobile infrastructure node **24502** and provide instructions to emergency network management client module **24602** (via radio access infrastructure **24514** and the backhaul connection) in **24718**. For example, in addition to selecting mobile infrastructure nodes to activate, in some aspects emergency network management server **24614** may also select a fronthaul configuration (e.g., a hotspot configuration for the local radio access network provided by fronthaul modem **24612** and fronthaul antenna system **24510**). In some aspects, emergency network management server **24614** may also identify a specific area and/or route that mobile infrastructure node **24502** should go to, patrol, or follow. Emergency network management server **24614** may then include such instructions in **24718**.

Emergency network management client module **24604** may then receive the instruction from emergency network management server **24614** and provide mobile infrastructure functions according to the instruction in **24720**. Any other mobile infrastructure nodes selected for activation by emergency network management server **24614** may similarly provide mobile infrastructure functions based on any received instructions.

For example, in some aspects emergency network management client module **24602** may provide a fronthaul configuration (specified by emergency network management server **24614)** to fronthaul modem **24612**, which may specify configuration parameters for the local radio access network provided by fronthaul modem **24612** via fronthaul antenna system **24506.** Accordingly, fronthaul modem **24612** may begin operating the local radio access network according to the fronthaul configuration and therefore provide network connectivity to proximate terminal devices **24520-24524**. In some aspects, fronthaul modem **24612** may be configured to broadcast beacon signals to advertise the local radio access network, and may connect to responding terminal devices.

In some aspects, fronthaul modem **24612** may provide the local radio access network in an 'open-to-all' mode, where the local radio access network (e.g., cellular small cell or short range access point) accepts all SIMs and subscribers.

In some aspects, mobile infrastructure node **24502** may continue to provide mobile infrastructure functions to proximate terminal devices for an extended period of time. In some aspects, baseband modem **24608** may eventually detect that the critical network scenario is resolved, such as a restoration of network connectivity. Baseband modem **24608** may notify emergency network management client module **24602**, which may then provide an update to emergency network management server **24616**. Emergency network management server **24616** may then decide to terminate the mobile infrastructure functions, for example, to deactivate the activated mobile infrastructure nodes, based on any received updates (such as if a large number of mobile infrastructure nodes notify emergency network management server **24616** that network connectivity has been restored).

In some aspects, emergency network management server **24616** may continue to evaluate the critical network scenario, such as based on continual reports provided by activated mobile infrastructure nodes that indicate status and capability information. For example, emergency network management server **24616** may activate certain mobile infrastructure nodes (e.g., upgrade to provide a local radio access network) that were not previously activated, deactivate certain mobile infrastructure nodes that were previously activated, and/or adjust the fronthaul configuration of activated mobile infrastructure nodes based on the current status and capability information. In some aspects, emergency network management server **24616** may be configured to repetitively perform this reevaluation with a fixed period or may dynamically perform the reevaluation based on received updates.

In some aspects, instead of coordination provided by a central entity such as emergency network management server **24616**, a plurality of mobile infrastructure nodes may coordinate with one another in a distributed manner to organize provision of network connectivity in the event of a critical network scenario. FIG. **248** shows an exemplary scenario in accordance with some aspects, where mobile infrastructure nodes **24802**, **24804**, and **24806** may coordinate with one another to respond to critical network scenarios. Accordingly, upon detection of a potential critical network scenario (e.g., at a baseband modem), one of mobile infrastructure nodes **24802-24806**, for example, mobile infrastructure node **24802**, may notify mobile infrastructure nodes **24804** and **24806** of the potential critical scenario. As the local radio access network is disabled, mobile infrastructure nodes **24802-24806** may utilize the respective fronthaul systems (including a fronthaul modem and fronthaul antenna system) to communicate with one another. In an exemplary scenario where mobile infrastructure node **24802** detects a potential critical network scenario and no other mobile infrastructure nodes are within range of mobile infrastructure node **24802**, mobile infrastructure node **24802** may utilize the backhaul system (including a fronthaul modem and fronthaul antenna system) to communicate with other mobile communication nodes via radio access infrastructure **24814**.

Accordingly, upon detecting a potential critical network scenario, mobile infrastructure node **24802** may coordinate with mobile infrastructure nodes **24802-24806** to verify whether the potential critical network scenario is a critical network scenario and, if so, organize provision of network connectivity, including target areas (where each of mobile infrastructure nodes **24802-24806** should serve), fronthaul configurations, routes, etc. As mobile infrastructure nodes **24802-24806** may maintain a backhaul connection to core/internet network **24828**, mobile infrastructure nodes **24802-24806** may provide network connectivity to any proximate terminal devices that connect to the local radio access network provided by any of mobile infrastructure nodes **24802-24806** via radio access infrastructure **24814** and the backhaul connection.

Mobile infrastructure nodes **24802-24806** may therefore address critical network scenarios in a distributed manner without coordination by a central entity, for example, may address critical network scenarios in a self-organizing manner.

In some aspects, one or more of the mobile infrastructure nodes may be fully autonomous. Accordingly, a mobile infrastructure node such as mobile infrastructure node **24502** shown in FIG. **249** may utilize autonomous driving system **24902** to control driving of mobile infrastructure node **24502** (e.g., without a driver). Mobile infrastructure node **24502** and other autonomous mobile infrastructure nodes may therefore perform this functionality autonomously.

In some aspects, one or more of the mobile infrastructure nodes may not be autonomous. Accordingly, in some aspects processing module **24504** may obtain explicit approval of a driver or owner of mobile infrastructure node **24502.** Processing module **24504** may therefore contact the driver/owner (e.g., via user I/O, e.g., in the event of a potential critical network scenario detected by baseband modem **24608**) to notify the driver/owner of a potential critical network scenario. Processing module **24504** may then wait for a user command (via user I/O) to activate the emergency network management functions. In some aspects, emergency network management client module **24514** may provide directions and/or other user instructions to the driver/owner (such as locations, routes, or other instructions provided by emergency network management server **24616**) that mobile infrastructure node **24502** is expected to carry out to provide network connectivity to an affected area.

Accordingly, in some aspects mobile infrastructure node **24502** may be used by the driver/owner for unofficial use (e.g., use not directly related to the current aspects) and may be subsequently 'activated' upon detection of a potential critical network scenario. Mobile infrastructure node **24502** may then transition to active use in order to provide network connectivity. In some aspects, the functionality and components may be implemented into a large number of vehicles, which may each be configured to perform the functions of the current aspects on demand.

Furthermore, as previously indicated, critical network scenarios may also include network overload conditions. In an exemplary scenario of a network overload condition, a traffic jam may occur on a particular road, which may have the potential to exert severe strain on the radio access network and/or underlying core network due to the high concentration of users and vehicles with network connections. Accordingly, any mobile infrastructure nodes involved in the traffic jam (e.g., being used for unofficial use when caught in a traffic jam) may be able to provide additional network capacity to alleviate network loading.

For example, in some aspects the fronthaul system (e.g., fronthaul modem **24612** and fronthaul antenna system **24506**, which may be providing the local radio access network as e.g., a cellular small cell or short-range access point) of the mobile infrastructure node may be preconfigured with a known identity (e.g., an SSID or cell ID) by a network operator. Accordingly, other proximate terminal devices may utilize this known identity to connect to mobile infrastructure nodes, which may act as a network access node (providing the local radio access network) and provide a gateway to radio access infrastructure.

In some aspects, the mobile infrastructure nodes may act as a gateway to nearby roadside radio access infrastructure (which may be operator-deployed) and/or to more remote radio access infrastructure (such as satellite-based radio access infrastructure). This use of mobile infrastructure nodes may provide a variety of benefits to the network operator, including extended range, increased capacity, reduced signaling load for road side infrastructure base stations, and a greater degree of freedom (due to the increased number of infrastructure nodes) for traffic load distribution and management. In some aspects, network operators may employ updated network management algorithms to account for the mobility of mobile infrastructure nodes, which may present more complex scenarios compared to stationary radio access infrastructure (e.g., where static picocells can be dynamically switched on and off) as the mobile infrastructure nodes may be moving.

Furthermore, in some aspects emergency network management server **24616** (or the functionality and operation of emergency network management server **24616**) may be owned and/or controlled by the network operator. The network operator may therefore have full control of dynamically activating cars and vehicles to activate them as mobile infrastructure nodes. Accordingly, the communication protocols between emergency management network client module **24602** and emergency network management server **24616** can be extended to facilitate this greater degree of control by the network operator. For example, emergency network management server **24616** can be configured to send paging messages to all terminal devices proximate to existing radio access infrastructure. Any vehicular terminal devices that have mobile infrastructure node functionality may then receive the paging messages (at the emergency management network client module) and subsequently respond with a capability (e.g., supported mobile infrastructure functions) and status information message. Emergency network management server **24616** may then select and configure local hotspots (provided via fronthaul) using the available mobile infrastructure nodes (e.g., in the manner previously detailed). In some aspects, vehicle manufacturers and network operators may have existing contracts due to the built-in SIM cards and data plans for telematics data. Accordingly, these existing contracts may be extended to cover mobile infrastructure functions and grant network operators access to activation/deactivation and other control of mobile infrastructure nodes.

In some aspects, emergency network management server **24616** may monitor the current load of radio access infrastructure (e.g., roadside radio access infrastructure) and maintain a database of historical roadside radio access infrastructure load. Emergency network management server **24616** can then trigger the paging message dependent on the load profile indicated by the database. In this manner, emergency network management server **24616** may be able to dynamically extend the capacity of the roadside radio access infrastructure using mobile infrastructure nodes as local hotspots during times and locations when and where network congestion occurs.

FIG. **250** shows method **25000** of providing network connectivity to an area impacted by network overload or outage at a mobile infrastructure node in accordance with some aspects. As shown in FIG. **250**, method **25000** includes identifying a geographic area in which network connectivity is disrupted (**25010**), communicating with a management server, via a radio backhaul connection provided by a backhaul antenna system, to receive an instruction (**25020**), and activating a fronthaul antenna system and providing network connectivity, via the fronthaul antenna system and the backhaul antenna system, to one or more terminal devices in the geographic area according to the instruction (**25030**).

FIG. **251** shows method **25100** of coordinating one or more mobile infrastructure nodes to respond to network connectivity disruptions in accordance with some aspects. As shown in FIG. **251**, method **25100** includes receiving a notification that a potential critical network scenario has occurred in a geographic area (**25110**), evaluating status information in the notification to determine that the potential critical network scenario is a critical network scenario (**25120**), and providing instruction to one or more mobile infrastructure nodes to provide network connectivity to the geographic area (**25130**).

7.5 Hierarchical Communication #5

In some aspects of this disclosure, a cluster of terminal devices may assume the same downlink identity and receive downlink data from a network access node, e.g., via multicast transmission. Accordingly, from the perspective of the network access node, the network access node may function as if it were serving a single device. The terminal devices of the cluster may then share an uplink channel (e.g., by time division, etc.) to transmit data to the network access node, and may coordinate with each other via a sidelink channel.

FIG. **252** shows an exemplary scenario in accordance with some aspects. As shown in FIG. **252**, terminal devices **25202a-37y02c** can form cluster **25204**, which may transmit and receive signals with network access node **25210**. Network access node **25210** may interface with internet network **25208** (which may in some aspects through a core network; not explicitly shown in FIG. **252**) to provide a network connection to terminal devices **25202a-37y02c**.

Terminal devices **25202a-37y02c** may communicate with network access node **25210** (transmit and receive radio signals) over radio channel **25206**. In some aspects, terminal devices **25202a-37y02c** and network access node **25210** may utilize a time division duplexing (TDD) or frequency division duplexing (FDD) scheme to transmit and receive uplink and downlink signals on radio channel **25206**.

In some aspects, terminal devices **25202a-37y02c** may also maintain a local connection with each other over a sidelink channel, which terminal devices **25202a-37y02c** may utilize to communicate and coordinate movement and communications. In some aspects, terminal devices **25202a-37y02c** may be aerial terminal devices such as drones. In some aspects, terminal devices **25202a-37y02c** may be terrestrial vehicular terminal devices such as robots, autonomous vehicles, or another type of terrestrial vehicular terminal device. In some aspects, terminal devices **25202a-25202c** may be Internet of Things (IoT) terminal devices. In some aspects, terminal devices **25202a-37y02c** can include one or more types of terminal devices, such as one or more of aerial terminal devices, terrestrial vehicular terminal devices, and/or IoT terminal devices.

FIG. **253** shows an exemplary internal configuration for terminal device **25300** in accordance with some aspects. In some aspects, one or more of terminal devices **25202a-25202c** may be configured in the manner of FIG. **253** and may communicate and move as detailed regarding terminal device **25300**. As shown in FIG. **253**, terminal device **25300** may include antenna system **25302**, RF transceiver **25304**, communication module **25306**, and (optionally) steering and movement system **25308**. In some aspects, antenna system **25302** and RF transceiver **25304** may be configured in the manner of antenna system **21702** and RF transceiver **21704** of terminal device **21602** as detailed regarding FIG. **217**.

In some aspects, communication module **25306** may be realized as baseband and/or application layer components, and/or may be implemented as a hardware-defined module, e.g., as one or more dedicated hardware circuits or FPGAs, as a software-defined module, e.g., as one or more processors executing program code that define arithmetic, control, and I/O instructions (e.g., software and/or firmware) stored in a non-transitory computer-readable storage medium, or as a mixed hardware-defined and software-defined module.

In some aspects, where terminal device **25300** is an aerial terminal device, steering and movement system **25308** can be implemented as a set of rotors and/or aerial propulsion engines and associated electronics control circuitry. In some aspects where terminal device **25300** is a terrestrial vehicular terminal device, steering and movement system **25308** may be a set of wheels, tracks/treads, engine/motor or other terrestrial movement mechanism and associated electronics control circuitry. In some aspects, such as where terminal device **25300** is an IoT device or non-vehicular terminal device, terminal device **25300** may not include steering and movement system **25308** (as indicated by "Optional" and the dashed lines of FIG. **253**.

Communication module **25306** may be configured to transmit and receive radio signals (via RF transceiver **25304** and antenna system **25302**) according to the communication protocols and mechanisms detailed herein. Communication module **25306** may be configured to transmit and receive data with other terminal devices in a cluster with terminal device **25300** (such as one or more of terminal devices **25202a-37y02c** in the exemplary setting of FIG. **252**), over a logical software-level connection that transmits and receives data as radio signals via RF transceiver **25304** and antenna system **25302**.

Communication module **25306** may be configured to transmit and receive data with a network access node

(such as network access node **25210** in the exemplary setting of FIG. **252**), over a logical software-level connection that transmits and receives data as radio signals via RF transceiver **25304** and antenna system **25302**. As the network access node may interface with an internet network (e.g., internet network **25208**), communication module **25306** may transmit and receive data with the internet network on a logical software-level connection via the radio access network and underlying routing provided by the network access node.

In some aspects, communication module **25306** may also be configured to perform one or more of selecting a leader terminal device (e.g., a terminal device selected to perform coordination functionality for a group of terminal devices; the selection may be based on trust, track record, ability to perform coordination functionality, etc.) from a plurality of terminal devices, establishing a connection and communicating with the plurality of terminal devices, configuring a shared terminal device identification among the plurality of terminal devices, configuring a shared downlink channel among the plurality of terminal devices, and sharing an uplink channel with the plurality of terminal devices. The leader terminal device may be the final decision maker on device coordination with regard to communicating with a network access node as a single identity. As terminal device **25300** may in some aspects communicate with other terminal devices over a sidelink channel and a network access node over a main channel (uplink and downlink), RF transceiver **25304** and antenna system **25302** may include a first section for communicating with other terminal devices and a second section for communicating with a network access node, where communication module **25306** may control the first section and the second section to perform the associated communications.

In some aspects, network access node **25210** may be configured in the manner of network access node **21610** as shown and detailed in FIG. **218**. Network access node **25210** may therefore transmit and receive data as radio signals via an antenna system, radio module, and communication module. In some aspects, network access node **25210** may be a cellular base station. In some aspects, network access node **25210** may be an access point.

FIG. **254** shows an exemplary scenario that illustrates downlink communications in accordance with some aspects. As shown in FIG. **254**, network access node **25210** may transmit downlink data to terminal devices 25202a-37y02c of cluster 25204 on downlink channel 25206a (which may be the downlink channel of radio channel 25206 of FIG. 252).

In some aspects, network access node 25210 may transmit the downlink signals as a multicast transmission. Accordingly, instead of unicast transmission in which network access node 25210 may direct downlink transmissions to a single terminal device, network access node 25210 may multicast downlink transmissions to all of cluster 25204, e.g., terminal devices 25202a-37y02c. In some aspects, terminal devices 25202a-37y02c may share a terminal device identification (e.g., an RNTI or similar terminal device identifier). Accordingly, network access node **25210** may transmit downlink data addressed to the shared terminal device identification. Multiple of terminal devices **25202a-37y02c** may therefore receive the downlink data. In some aspects, this may be transparent to network access node **25210**. For example, network access node **25210** may transmit downlink data to a terminal device identification without explicitly knowing whether the terminal device identification is a shared terminal device identification or a single terminal device identification.

In some aspects, network access node **25210** may use multicast only for certain downlink data to terminal devices **25202a-37y02c**. For example, in some aspects network access node **25210** may use multicast to transmit downlink control data and use unicast to transmit downlink user-plane data. Accordingly, terminal devices **25202a-37y02c** may all receive the same control data (from the same control channel) via multicast and may receive separate user-plane data. In some aspects, network access node **25210** may use multicast for all downlink data, e.g., both control and user-plane data.

FIG. **255** shows an exemplary scenario that illustrates uplink communications in accordance with some aspects. As shown in FIG. **255**, network access node **25210** may transmit downlink data to terminal devices **25202a-37y02c** of cluster **25204** on uplink channel **25206b** (which may be the uplink channel of radio channel **25206** of FIG. **252**, counterpart to downlink channel **25206a** of FIG. **254**).

In some aspects, terminal devices **25202a-25202c** may share uplink channel **25206b** according to a multiple access scheme. For example, terminal devices **25202a-25202c** may take turns performing uplink transmissions to network access node **25210**. In some aspects, terminal devices **25202a-25202c** may share uplink channel **25206b** in a prescheduled manner, such as in accordance with a Time Division Multiple Access (TDMA) scheme that is coordinated between terminal devices **25202a-37y02c** (e.g., either in a distributed manner or a centralized manner by a leader terminal device, as further detailed below).

For example, one of terminal devices **25202a-25202c**, such as terminal device **25202a**, may be scheduled to access uplink channel **25206b** during a given time slot, where all of terminal devices **25202a-25202c** are aware of the scheduling ahead of time and only transmit during a time slot that is assigned to them. Terminal devices **25202b** and **25202c** may refrain from transmitting during the time slot to enable terminal device **25202a** to transmit an uplink transmission on uplink channel **25206b** without collision. Other multiple access schemes that preschedule transmissions at terminal devices **25202a-37y02c** may also be utilized, such as FDMA, TDMA, or CDMA (assuming the frequency/time/coding synchronization can be realized between terminal devices **25202a-25202c**).

In some aspects, terminal devices **25202a-37y02c** may share uplink channel **25206b** without prescheduling access to the channel to a specific terminal device. For example, in some aspects terminal devices **25202a-37y02c** may share uplink channel **25206a** in accordance with a contention-based multiple access scheme, such as carrier sense multiple access (CSMA). Terminal devices **25202a-25202c** may therefore perform carrier sensing on uplink channel **25206b** before attempting to transmit and avoiding collisions by waiting until uplink channel **25206b** is free to begin the transmission.

In some aspects, terminal devices **25202a-37y02c** may incorporate the prescheduled transmissions, for example, for TDMA, into an existing schedule enforced by network access node **25210** that specifies certain time slots for uplink communications. Such may be important if the cluster-based communication is implemented in a manner that is transparent to network access node **25210**, as network access node **25210** may expect to receive uplink transmissions from terminal devices **25202a-37y02c** during specific time slots and may not be able to successfully receive uplink transmissions that are not aligned with the time slots.

In some aspects, terminal devices **25202a-25202c** may select a 'leader' terminal device that is responsible for communicating with network access node **25210** and/or for coordinating cluster **25204**. As shown in FIG. **254**, terminal devices **25202a-37y02c** may locally communicate with one another, such as using sidelink channels that are transparent to network access node **25210**. For example, terminal devices **25202a-25202c** may utilize a different radio access technology (such as Bluetooth or Wi-Fi, which may be on a different frequency) for sidelink communication between each other than the radio access technology used on channel **25206** for uplink and/or downlink communications. In some aspects, terminal devices **25202a-25202c** may be connected with a wired connection, for example, a wireline connection, and may utilize the wired connection as the sidelink channel. Accordingly, terminal devices **25202a-25202c** may communicate locally using the sidelink channels.

Using the sidelink channels, terminal devices **25202a-25202c** may select a leader terminal device from terminal devices **25202a-25202c**. The leader terminal device may then assume responsibility for acting as a communication gateway and/or coordinating other functions of cluster **25204**. For example, in an exemplary scenario, terminal devices **25202a-25202c** may select terminal device **25202a** as the leader terminal device. In some aspects, leader terminal device **25202a** may then act as communication gateway to the other terminal devices of cluster **25204** (e.g., terminal devices **25202b** and **25202c**).

For example, instead of transmitting uplink data directly to network access node **25210,** terminal devices **25202b** and **25202c** may instead transmit the uplink data to leader terminal device **25202a**, which may then transmit the uplink data to network access node **25210**. Leader terminal device **25202a** may therefore act as a communication gateway by relaying uplink data from terminal devices **25202b** and **25202c** to network access node **25210**.

In some aspects, terminal devices **25202a-25202c** may select a terminal device that is close (e.g., closest) to network access node **25210,** that has high (e.g., the highest) battery power, and/or that has high (e.g., the highest) uplink transmission power capabilities as the leader terminal device. This may in some cases provide a high-performance relaying channel between cluster **25204** and network access node **25210**. Accordingly, in some aspects, one or more of terminal devices **25202a-25202c** may not maintain a direct connection with network access node **25210,** and may instead maintain an indirect connection (relying on a relaying scheme) via a leader terminal device that is acting as a communication gateway.

In some aspects, the non-leader terminal devices (e.g., 'secondary' terminal devices) may maintain a direct connection with the leader terminal device. In some aspects, the secondary terminal devices may maintain indirect connections with the leader terminal device, such as via a multi-hop or mesh network.

In some aspects, leader terminal device **25202a** may additionally or alternatively coordinate certain functions of cluster **25204**. For example, in some aspects leader terminal device **25202a** may assume a coordinator role for access to uplink channel **25206b**, such as by performing the prescheduling functions detailed above for a multiple access scheme for uplink channel **25206b**. For instance, leader terminal device **25202a** may allocate time slots of a TDMA scheme (which may in some aspects be aligned with a communication schedule enforced by network access node **25210**) between terminal devices **25202a-25202c** to share uplink channel **25206b**.

In some aspects, leader terminal device **25202a** may also allocate the sidelink channel resources between terminal devices **25202a-25202c**. As the sidelink channel may be finite (e.g., a radio or wired interface with finite bandwidth), only a certain number of terminal devices may be able to utilize the sidelink channel at a time. Leader terminal device **25202a** may coordinate access to the sidelink channel to provide terminal devices **25202a-25202c** with a fair opportunity to access the sidelink channel, e.g., according to a multiple access scheme.

For instance, if leader terminal device **25202a** is acting as a communication gateway between terminal devices **25202a-25202c** and network access node **25210**, leader terminal device **25202a** may coordinate with terminal devices **25202b** and **25202c** to provide sidelink channel resources (e.g., certain subcarriers and/or time slots) for terminal devices **25202b** and **25202c** to transmit uplink data to leader terminal device **25202a**. Leader terminal device **25202a** may receive the uplink data according to the allocated sidelink channel resources and relay the uplink data to network access node **25210**. In some aspects, leader terminal device **25202a** may also allocate sidelink channel resources to terminal devices **25202b** and **25202c** for transmission of other local communications, such as for leader terminal device reselection, task offloading, and other control information.

In some aspects, network access node **25210** and terminal devices **25202a-25202c** may utilize a duplexing scheme such as time division duplexing (TDD) or frequency division duplexing (FDD) to duplex between downlink transmissions from network access node **25210** and terminal devices **25202a-25202c** and uplink transmissions from terminal devices **25202a-25202c** to network access node **25210**. Accordingly, in an exemplary FDD setting, network access node **25210** may transmit downlink transmissions on a different frequency band than what terminal devices **25202a-25202c** transmits uplink transmissions on. In an exemplary TDD setting, network access node **25210** may transmit downlink transmissions at different times from when terminal devices **25202a-25202c** transmit uplink transmissions.

The current aspects may therefore provide a mechanism to reduce the network burden by establishing interconnectivity between a plurality of terminal devices (e.g., a cluster), from which one terminal device is designated to be the leader terminal device.

Accordingly, in some aspects a plurality of terminal devices **25202a-37y02c** (e.g., cluster **25204**) and a network access node **25210** can communicate at least through a leader terminal device, where the plurality of terminal devices **25202a-25202c** can select the leader terminal device. In order to select the leader terminal device, terminal devices **25202a-37y02c** can establish a communications link with each other, e.g., via sidelink channels. Terminal devices **25202a-37y02c** can then select one terminal device to be the leader terminal device, e.g., terminal device **25202a**, where the remaining terminal devices can be secondary terminal devices.

As noted above, in some aspects, leader terminal device **25202a** may be responsible for direct communication with network access node **25210** on behalf of secondary terminal devices **25202b-25202c**, for example, as a communication gateway. In some aspects, leader terminal device **25202a** may additionally or alternatively be responsible for coordinating communications from secondary terminal devices **25202b-25202c** to network access node **25210,** such as by scheduling time slots for secondary terminal devices **25202b-25202c** to utilize to transmit to network access node **25210,** e.g., in accordance with a TDMA scheme. In some aspects, leader terminal device **25202a** may also allocate and/or distribute resources for terminal devices **25202a-25202c** to be used for the sidelink channels on which terminal devices **25202a-25202c** locally communicate with each other.

In some aspects, terminal devices **25202a-25202c** can share a terminal device identification. The shared terminal device identification may be a terminal device identification in accordance with any radio access technology, such as an LTE terminal device identification (e.g., RNTI), a 5G terminal device identification, or a terminal device identification of another radio access technology. As terminal device identifications can enable a wireless communication to be designated for a specific device, terminal devices **25202a-25202c** may receive the same wireless communications according to the shared terminal device identification. Accordingly, network access node **25210** may address a downlink transmission using the shared terminal device identification, which terminal devices **25202a-25202c** may receive and determine that the downlink transmission is intended for them. In light of this configuration, network access node **25210** can perform multicast downlink transmissions the terminal devices terminal devices **25202a-25202c** on downlink channel **25206a** by addressing the multicast downlink transmission with the shared terminal device identification.

Network access node **25210** may therefore multicast data to terminal devices **25202a-25202c** (including leader terminal device **25202a** and secondary terminal devices **25202b** and **25202c**). In order to coordinate multicast data reception, in some aspects leader terminal device **25202a** may provide the shared device identification to secondary terminal devices **25202b** and **25202c,** over the sidelink channel (e.g., a first sidelink channel between leader terminal device **25202a** and secondary terminal device **25202b** and a second sidelink channel between leader terminal device **25202a** and secondary terminal device **25202c**). Terminal devices **25202a-25202c** may therefore each receive downlink multicast transmissions from network access node **25210**.

In an exemplary scenario where one of terminal devices **25202a-25202c**, for example, terminal device **25202b**, is separated from the remaining terminal devices, for example, terminal devices **25202a** and **25202c**, such that the separated terminal device (terminal device **25202b**) cannot receive the downlink multicast transmission from network access node **25210**, it may be possible for one of the remaining terminal devices (**25202a** or **25202c**; in some aspects the leader terminal device may be responsible for this relaying) to receive the downlink multicast transmission and relay the downlink multicast transmission to the separated terminal device (terminal device **25202b**).

In some aspects, leader terminal device **25202a** may decline or terminate its status as the leader terminal device. Similarly, one of secondary terminal devices **25202b** or **25202c** may request that the status of leader terminal device **25504** be transferred to it. Additionally or alternatively, in some aspects, one of terminal devices **25202a-25202c** may nominate itself or another of terminal devices **25202a-25202c** to become the leader terminal device. Thus, the status as leader terminal device can be gained, lost, or transferred within terminal devices **25202a-25202c**.

In some aspects, one possibility for a change of the leader terminal device is in response to a function indicator of the leader terminal device. For example, in an exemplary scenario where terminal device **25202a** is the leader terminal device, the function indicator can be any indicia of functionality of leader terminal device **25202a**, which may include one or more tasks that leader terminal device **25202a** can complete, one or more tasks that leader terminal device **25202a** can no longer complete, or one or more tasks that leader terminal device **25202a** is unable to complete. An exemplary function indicator may be the battery power of leader terminal device **25202a**. As leader terminal device **25202a** can be responsible for direct communication on behalf of the secondary terminal devices, and because wireless transmission with network access node **24210** may require higher power consumption than communications between terminal devices **25202a-25202c** on the sidelink channels (e.g., Bluetooth), leader terminal device **25202a** may be subject to more rapid power depletion than the secondary terminal devices. Accordingly, in some aspects, leader terminal device **25202a** may, upon determining that it has a low or reduced power supply, may reject its status as leader terminal device or may issue a request that another of terminal devices **25202a-25202c** assume the role of the leader terminal device.

Additionally or alternatively, in some aspects a link quality may be a function indicator, such as the link quality between a terminal device and network access node **25210**. As leader terminal device **25202a** may in some aspects assume uplink communication responsibilities (e.g., as a communication gateway to relay uplink data) for the secondary terminal devices, a high link quality between the leader terminal device and network access node **25210** may be important.

When the link quality between the leader terminal device, e.g., leader terminal device **25202a**, and network access node **25210** deteriorates or otherwise becomes undesirable, leader terminal device **25202a** may issue a function indicator to the secondary terminal devices, e.g., secondary terminal devices **25202b** and **25202c** that indicates that the link quality is unsuitable. In that event, one of secondary terminal devices **25202b** or **25202c** may determine that it has an acceptable (or better) link quality to network access node **25210** and may assume the position of leader terminal device **25202a**.

In some aspects, terminal devices **25202a-25202c** may select a leader terminal device, for example, leader terminal device **25202a**. In some aspects, terminal devices **25202a-25202c** may communicate with each other over the sidelink channel to coordinate selection of the leader terminal device. In some aspects, terminal devices **25202a-25202c** may perform the selection based on one or more selection criteria, including but not limited to, available battery power, expected battery life, overall processing power, available processing resources, signal strength, temperature, or wireless link quality with the network access node. In various non-limiting examples, terminal devices **25202a-25202c** could select the terminal device with the highest battery power as the leader, select the terminal device that physically located in the middle/between the other terminal devices, select the device with sufficient processing power and/or memory, etc. In some aspects, there could be several 'rounds' of an election process to decide on the leader terminal device. This election process may occur on a sidelink and/or may be predefined. It is expressly contemplated that other qualities may render a particular terminal device a more appropriate candidate as a leader terminal device.

As previously indicated, in some aspects the status of leader terminal device can be resigned, lost, or transferred. For example, selection criteria (e.g., as detailed above) for a leader terminal device may vary over time due and, accordingly, the suitability of terminal devices for the leader terminal device role may be transient. For instance, a leader terminal device such as terminal device **25202a** may experience expedited battery depletion due to its extra responsibilities as a leader terminal device, while secondary terminal devices **25202b** and **37y02c** may consume considerably less power (e.g., communicating on the low-power sidelink channel). Accordingly, terminal device **25202a** may become less suitable for its role as leader terminal device. In this event, the role of leader terminal device may be transferred to another of terminal devices **25202a-37y02c**.

In some aspects, it may be advantageous to change the leader terminal device whenever any one of the selection criteria become disadvantageous, such as in the event of a reduction of expected battery life, a diminution in overall processing power or available processing resources, a reduction in signal strength, and change in temperature, or a decline in the wireless link quality with the network access node. In some aspects, terminal devices **25202a-37y02c** may be configured to periodically evaluate the suitability of the leader terminal device based on the selection criteria (e.g., according to a fixed period) and select a new leader terminal device if warranted.

The method of selecting a leader terminal device may be achieved through any suitable known algorithm or communication scheme. For example, in some aspects terminal devices **25202a-25202c** may exchange selection criteria, nominate, or request a status as leader terminal device through the sidelink channels between terminal devices **25202a-25202c**.

The method of selecting a leader terminal device and the general local communication between terminal devices **25202a-25202c** may use sidelink channels between terminal devices **25202a-25202c**. The sidelink channels may utilize various different radio access technologies, such as a D2D technology, a V2V technology, or a peer-to-peer (P2P) technology. The sidelink channels may be on licensed or unlicensed frequency bands.

In some aspects, terminal devices **25202a-25202c** may have wireline connections or another type of wired connection that uses a wire or cable. Under this circumstance, terminal devices **25202a-25202c** may locally communicate with one another on the sidelink channels over a wire-connection and communicate with network access node **25210** in the uplink direction over a wireless connection (e.g., direct or via the leader terminal device). In the downlink direction, terminal devices **25202a-25202c** may communicate wireless with network access node **25210** (e.g., in accordance with the shared terminal device identification scheme introduced above for multicast).

In some aspects, one or more of terminal devices **25202a-25202c** may offload certain tasks to other terminal devices **25202a-25202c**. Exemplary tasks that can be offloaded include decoding, encoding, processing, transmission, reception, control channel search, paging channel monitoring, broadcast channel search, rank indicator monitoring, and modulation and coding scheme monitoring. Accordingly, a first terminal device, for example, terminal device **25202a**, may request for a second terminal device, e.g., terminal device **25202b**, to perform a certain task (where the tasks that the second terminal device is capable of performing may be indicated in a function indicator advertised by the second terminal device). The second terminal device may then perform the task and provide the task output back to the first terminal device (e.g., over the sidelink channel).

For example, the first terminal device may request for the second terminal device to perform a control channel search (e.g., on downlink channel **25206a**) to determine if there is a control message. The second terminal device may perform the control channel search as requested and send any decoded control information to the first terminal device over the sidelink channel. Accordingly, in particular if the sidelink channel is low power (e.g., Bluetooth), this may conserve battery power at the first terminal device. Other tasks can also be offloaded without departing from the scope of this disclosure.

In some aspects, the task offloading process may be transparent to network access node 25210. In some aspects, the overall set of tasks eligible for offloading can be defined in a task set. Task offloading may be particularly useful where a terminal device tasked with coding or decoding lacks the processing power or availability, or is experiencing increased processor temperature, such that the coding or decoding tasks are more desirably offloaded. The delegation may be based on a temporary or a permanent limit or availability of resources, or any combination thereof.

In some aspects, terminal devices **25202a-37y02c** may tag uplink data with different respective tags, which may enable an end data sink (e.g., at internet network **25208,** network access node **25210,** or a core network location such as a routing entity) to identify which of terminal devices **25202a-37y02c** transmitted the uplink data. Accordingly, while terminal devices **25202a-37y02c** may receive downlink data in a multicast format in accordance with the shared terminal device identification, in some aspects, an end data sink (that is communicating with one or more of terminal devices **25202a-25202c**) may expect to be able to differentiate between uplink data send by each of terminal devices **25202a-25202c.** Accordingly, one or more of terminal devices **25202a-37y02c** may embed the tag in the uplink data, such as at the IP layer or at the application layer.

In some aspects, terminal devices **25202a-37y02c** may generate and embed the tags according to a tunneling protocol. In some aspects, an alternative tag may be used, whereby users are identified in data packet (e.g., in the payload) to distinguish transmitters. The end data sink may then identify the transmitting terminal device for uplink data based on the embedded tag.

In some aspects, terminal devices **25202a-25202c** (including the leader terminal device) may have one or more of subscriptions to network access node **25210.** Although some aspects above contemplate a single leader terminal device within the group of terminal devices **25202a-37y02c** where only the single leader terminal device has a direct uplink connection to network access node **25210,** in some aspects, there may be multiple leader terminal devices. This may occur in exemplary scenarios where it is desirable that fewer than all of terminal devices **25202a-37y02c** be connected to network access node **25210,** but where more than one network access node connection is desired. For example, a large industrial machine may include a plurality of sensors and/or devices, each of which may be capable of wired or wireless communication. Although it may suffice for the plurality of sensors and/or devices to connect to a single leader sensor or device, which connects to the network access node on behalf of the other sensors and/or devices, it may be desirable for a plurality of devices to connect to the network access node. Under such a scenario, the total number of sensors and/or devices may connect to a smaller number of leader sensors and/or devices, each of the smaller number having a wireless connection to the network access node. The plurality of terminal devices would then have a number of network access node subscriptions equal to the number of leader sensors and/or devices.

In some aspects, terminal devices **25202a-25202c** may share a terminal device identification and control channel in the downlink direction. From the perspective of network access node **25210,** terminal devices **25202a-25202c** can appear to be a single device. These shared resources create a multicasting environment, whereby a downlink transmission from network access node **25210** can be received by one or more of terminal devices **25202a-25202c** positioned to receive the downlink transmission in multicast format.

In some aspects, the wireless connection with network access node **25210,** whether in the uplink or downlink direction, may be any type of radio access technology. This may include any cellular radio access technology short-range radio access technology, including 5G and other emerging and upcoming radio access technologies.

In some aspects, terminal devices **25202a-25202c** may utilize one or more techniques detailed above regarding any of FIGs. **229-239,** such as to remain within a confined floating cell area surrounding an anchor terminal device, for example, the leader terminal device, and/or to coordinate with network access node **25210** to steer a directional beam provided by network access node **25210** towards the area occupied by terminal devices **25202a-25202c.**

The transmissions between any of terminal devices **25202a-25202c** (whether leader or secondary) and network access node **25210,** may include any type of data. Without limitation, this may include data relaying, real-time control forwarding or otherwise.

FIG. **256** shows method **25600** for terminal device communication in accordance with some aspects. As shown in FIG. **256,** method **25600** includes establishing a communications link between a plurality of terminal devices **(25610),** configuring a shared terminal device identification among the plurality of terminal devices **(25620),** configuring a shared downlink control channel among the plurality of terminal devices **(25630),** selecting a leader terminal device from the plurality of terminal devices, for wireless communication with a network access node **(25640),** and transmitting a terminal device request between a terminal device and the leader terminal device **(25650).**

FIG. **257** shows method **25700** for managing a leader terminal device in accordance with some aspects. As shown in FIG. **257,** method **25700** includes establishing a first communications link with one or more terminal devices **(25710),** establishing a second communications link with a network access node **(25720),** configuring a shared terminal device identification among the one or more terminal devices **(25730),** configuring a shared downlink control channel among the one or more terminal devices **(25740),** receiving a terminal device request from a terminal device **(25750),** and wirelessly communicating with the network access node based on the terminal device request **(25760).**

FIG **258** shows method **25800** for terminal device communication in accordance with some aspects. As shown in FIG. **258,** method **25800** includes establishing a first communications link between a plurality of terminal devices **(25810),** selecting a leader terminal device from the plurality of terminal devices for wireless communication with a network access node **(25820),** establishing a second communications link between the leader terminal device and the network access node **(25830),** transmitting a terminal device data from a terminal device to the leader terminal device **(25840),** and transmitting the terminal device data from the leader terminal device to the network access node **(25850).**

FIG. **259** shows method **25900** of performing radio communications at a terminal device in accordance with some aspects. As shown in FIG. **259,** method **25900** includes receiving, on a downlink channel, multicast data from a network access node that is addressed with a terminal device identification shared by the terminal device and one or more additional terminal devices **(25910),** and communicating, on a sidelink channel, with a leader terminal device of the one or more additional terminal devices to coordinate transmission of uplink data on a shared uplink channel to the network access node **(25920).**

FIG. **260** shows method **26000** of performing radio communications at a terminal device in accordance with some aspects. As shown in FIG. **260,** method **26000** includes receiving, on a downlink channel, multicast data from a network access node that is addressed to a terminal device identification shared by shared by the terminal device and one or more additional terminal devices (**26010**), and communicating, on a sidelink channel, with a first terminal device of the one or more additional terminal devices to coordinate transmission of uplink data from the first terminal device to the network access node **(26020).**

7.6 Hierarchical Communication #6

In some aspects of this disclosure, resources of a radio communication network may be dynamically allocated to a group of terminal devices. According to some aspects, the resources and mechanisms to utilize such resources may be configured to serve a particular application associated with the group of terminal devices. For instance, improved spectrum allocation and management may increase Quality of Service (QoS) for vehicle-to-vehicle (V2V) communications within (e.g., intra) and across (e.g., inter) groups of vehicles.

In one aspect of the disclosure, resources may be configured to serve one or more particular applications associated with a group of terminal devices through a resource block (also referred to as a "resource block configuration"). A resource block may, for instance, include one or more of a frequency band, a time slot, a code, and/or a combination thereof. The resource block may be defined by one or more of a carrier frequency, a numerology configuration, a physical resource block, a logical definition of control/data, and/or an access method.

A terminal device, such as terminal device **21602,** or group of terminal devices, such as terminal device **21602** and terminal device **21604,** may be configured to support a single resource block individually or several resource blocks simultaneously. Each of the resource blocks may be associated with a particular application and/or a QoS class as discussed below with respect to FIG. **261.** In one aspect of the disclosure, a terminal device, such as terminal device **21602,** may include one or more physical layer (PHY) interfaces (e.g., one for each configuration) depending upon frequency bands and PHY interfaces. Additionally, or alternatively, a software-based design may also be used to enable the radio(s) to adapt to specific PHY configurations.

FIG. **261** shows a radio communication network **26100** in accordance with some aspects. The radio communication network **26100** includes network access node **26110,** vehicles **46A-46C,** which define a first group (Group 1), and vehicles **46D-46E,** which define a second group (Group 2). According to one aspect of the disclosure, network access node **26110** may correspond to network access node **21610** as configured in FIG. **218** and vehicles **46A-46E** may correspond to terminal device **21602** or terminal device **21604.** In one example, a same or similar structure of terminal device **21602** or **21604** may be removably attached to or integrated in each of the vehicles **46A-x23E.** In other words, vehicle **46A** may include terminal device **26102,** vehicle **46B** may include terminal device **26104,** and vehicle **46C** may include terminal device **26106.** Similarly, vehicle **46D** may include terminal device **26112,** vehicle **46E** may include terminal device **26114,** and vehicle **46F** may include terminal device **26116.** In some aspects, the terminal devices may include modem-layer and/or application-layer processing modules (e.g., in the manner of baseband modem **21706** and/or application processor **21712**) configured to control the communication operations related to the current aspects, including transmitting and receiving data as radio signals with transceiver and antenna circuitry (e.g., RF transceiver **21704** and antenna system **21702**).

According to some aspects, terminal devices **26102, 26104, 26106, 26112, 26114, 26116** may be able to support dual connectivity over separate bands. Each of these devices may be equipped with multiple RF chains for communication over multiple bands. A licensed band may be used to communicate with the network access node **26116,** whereas an unlicensed band may be used to communicate over a D2D link. Other combinations, however, of licensed and/or unlicensed bands may also be implemented to communicate over multiple bands.

Terminal devices **26106** and **26114** may act as leader terminal devices of their respective groups. In one aspect, terminal devices **26106** and **26114** may be leader terminals or cluster-heads of their respective groups. Each group lead may utilize a set of particular applications or quality of service (QoS) classes to improve communications within respective groups. For instance, each group lead may run a set of particular applications in their media access control (MAC) layer queues. By way of example, the set of applications may include at least one of a vehicle-to-vehicle (V2V) safety application or a V2V discovery application. While the cluster heads are depicted as the only terminal devices running the set of particular applications, the disclosure is not so limited. One or more of terminal devices **26102, 26104,** and/or **26106** may run the set of particular applications for Group 1. Likewise, one or more of terminal devices **26112, 26114,** and/or **26116** may run the set of quality of service enhancements for Group 2.

Network access node **26110** may configure network resources to the set of applications for each group, e.g., may assign radio resources for the network to the set of applications. According to one aspect, resource block configurations may be tailored to a set of particular applications. Resource Block 1 may be configured to the V2V safety application, a licensed spectrum, a scheduled access mode, and Group 1. Resource Block 2 may be configured to a V2V discovery application, unlicensed spectrum, a contention based access mode, and Groups 1 and 2. Resource Block 3 may be configured to the V2V safety application, a licensed spectrum, and Group 2.

In some aspects, the data structure of the resource block configuration includes one or more of the parameters described below in Table 1.

Table 1: Resource Block Configuration

| Parameter | Description |
|---|---|
| Carrier Frequency | • Frequency band of operation (e.g., 900 MHz, 2.5GHz, 5.9 GHz) |
| | • Licensed/unlicensed operation |
| Numerology Configuration | • Identifier of the numerology to be used with the resource pool. For instance, LTE, 802.11p or other options specifically designed for V2V scenarios could be used.<br>• Terminal devices could have the parameters describing pre-configured numerologies and this field would only identify which option to use.<br>• It is possible that various sets of numerologies for slot/subframe/frame are defined in such a way that these time units in various sets are integer or sub-integer multiples of each other. |
| Frequency Parameters | • Specific frequency parameters for a given numerology should be provided. For instance, for OFDMA, frequency parameters would be needed: startPRB, endPRB and numPRB<br>• This field may not be applicable to some numerologies (e.g., 802.11p where the whole bandwidth is used). |
| Time Parameters | • Time parameters may also be specific to the numerology and the access mode used.<br>• In an OFDMA system, this could indicate period for control/data resources repetition |
| Access Mode | • Several access modes may be possible, for instance:<br>◦ Scheduled: dedicated block assigned to a group |

(continued)

| Parameter | Description |
| --- | --- |
| | of UEs;<br>◦ Shared (listen-before-talk): CSMA-based using priority based access parameters (e.g., 802.11e access parameters) |
| QoS Class | • The QoS Class defines the type of data that can use a given resource pool, for instance:<br>◦ V2V Safety Applications;<br>◦ V2V Discovery;<br>◦ Best Effort Traffic; and/or<br>◦ Other traffic; |
| Duration | • The duration defines the amount of time during which the resources are considered available for usage according to the specified parameters.<br>• This is an optional parameter. |

FIG. **262** shows one example of a contention-based access mode in accordance with some aspects. For instance, the channel is shared between one or more terminal devices. These terminal devices may contend for channel access using a distributed protocol, such as carrier sense multiple access (CMSA) using 802.11p.

FIG. **263** shows one example of a scheduled-based access mode in accordance with some aspects. For instance, the channel is dedicated and access is controlled by a network access node. In other words, the network access node may grant terminal devices access to the channel, and the terminal devices may then be able to access the channel without risk of collision.

In some aspects, a group of terminal devices may operate using different access modes depending upon their requirements.

In some aspects, resource block or portion thereof, or even a plurality of resource block(s) may be pre-configured in a terminal device. For instance, dedicated resource block(s) for public safety may be pre-configured in the terminal device. According to another aspect of the disclosure, resource blocks may be broadcasted by a network access node. For example, resource blocks for D2D communication and discovery may be broadcasted by the network access node as part of system information blocks (e.g., System Information Block type 18 (SIB18) and System Information Block type 19 (SIB19)).

In a static system where dedicated resources may be defined as non-overlapping with other uplink (UL) and downlink (DL) resources used by other terminal devices, pre-configured resource blocks may be appropriate. However, defined resources may also be configured on a group basis in a dynamic system. In such a case, resource block configurations may be broadcasted by the network access node as different SIBs, such that terminal devices are only expected to read the SIBs of interest.

In yet another aspect, a network access node may enable multiple groups to use different resource pools. For instance, a network access node may utilize a control channel, such as a multicast control channel (MCCH) to send a Group Resource Block configuration message. The Group Resource Block may include one or more parameters of Table 1 and a group identifier.

FIG. **264** shows one example of a Group Resource Block in accordance with some aspects. A group identifier of the Group Resource Block may enable a terminal device to be a part of multiple groups using different resource blocks. According to one aspect of the disclosure, the Group Resource Block may be sent during initialization, and/or during normal operation if the configuration of the resource blocks used by a group changes. Allocation may be signaled using a group identifier when, for instance, the MCCH is a logical channel sitting on a physical downlink shared channel (PDSCH). Terminal devices belonging to this group may acquire information on this allocation using the group identifier.

A network access node may monitor context information to determine what configuration to use and/or when to modify the resource block configuration. In one instance, the network access node may update a Group Resource Block for a group of terminal devices when they enter a certain coverage area. For example, a group of vehicles driving in a rural highway coverage may be configured to use a contention-based resource pool in unlicensed spectrum. In another example, the group of vehicles may be configured with a new resource block configuration to activate dedicated reservations for V2V safety traffic. Similar updates could also be performed when approaching situations, such as traffic intersections, which have a higher risk of traffic accidents.

FIG. **265** shows a network access node **26510** in accordance with some aspects, which may send the resource block configuration to a predetermined terminal device **26506** acting as a group leader. Network access node **26510** may correspond to network access node of **26106** of FIG. **261.** Terminal devices **26502-26506** may correspond to terminal device **26102-26106** of FIG. **261.** Upon receipt, the group leader may forward the resource block configuration within the group. For instance, a D2D communication link may be used to forward such messages within the group. In another example, a single broadcast transmission may be utilized by the group leader to forward the configuration information. The single broadcast channel may be used in cases where at least one of the terminal devices **26502-26504** of the group of terminal devices is outside the coverage area of the network access node **26510.**

The terminal device **26506** operating as a group leader may autonomously transmit one or more group resource block configurations messages over one or more communication interfaces, such as its D2D communications link in a broadcast mode or a unicast mode. In one aspect, network access node **26510** may be configured to enable or disable this feature.

The terminal device **26506** operating as a group leader may periodically transmit updates to the current resource block used by the group. Updates, for instance, may include one or more parameters of the current resource block or a new version of the current resource block. This option may be a more resource efficient alternative to the network access node **26510** updating the group over a multicast control channel. The network access node **26510,** however, may still update the terminal device **26506** operating as a group leader over the cellular interface, but the other terminal devices **26502-26504** of the group may not be expected to monitor the multicast control channel for updates. Additionally, or alternatively, the network access node 5010 may update each member of the group including the group leader with an update to the current resource block.

According to another aspect, a new terminal device to the group (not depicted) or a terminal device that is not active (also not depicted) may monitor resource blocks that are available within the group. Additionally or alternatively, the new terminal device to the group, for instance, may monitor and share resource block information from a previously associated group, which may enable one or more terminal devices **26502-26506** to join a new group or update an existing resource block configuration associated therewith.

In yet another aspect, terminal device **26506** operating as a group leader may be responsible for configuring resource blocks. In one example, terminal device **26506** may be configured with one or more specific carrier frequencies, which may be used to define new resource blocks in an out-of-coverage scenario. Additionally or alternatively, it may have one or more pre-configured resource blocks and/or portions thereof stored therein, including carrier frequency, numerology, and/or access mode for an out of coverage scenario. In a similar manner, terminal devices **26502-26504** may be pre-configured with resource blocks for communication (e.g., D2D) discovery outside network coverage, whereas other types of resource blocks (e.g., V2V safety) may be acquired from the terminal device **26506** operating as a group leader.

The terminal device **26506** operating as a group leader may transmit (e.g., unicast) a resource block configuration update to terminal device **26502** in response to receiving a request therefrom. For instance, a terminal device with a D2D discovery traffic may activate a V2V safety application. The V2V safety application, however, may utilize a different resource block configuration. Terminal device **26502** may send a request to the terminal device **26506** operating as a group leader for a resource block configuration appropriate for a V2V safety QoS class. The terminal device **26506** operating as a group leader may respond with available resource block information for the requested QoS class as illustrated in FIG. **266.** These actions may also be used to enable admission control for certain QoS classes under coordination of the terminal device **26506** operating as a group leader.

FIG. **266** shows terminal device **26606** acting as a group leader in accordance with some aspects, where terminal device **26606** may send the resource block configuration to one or more of terminal devices **26602-26604** in an out-of-coverage scenario. Terminal devices **26602-26606** may correspond to terminal device **26502-26506** of FIG. 26510.

The terminal device **26606** acting as a group leader may apply measurements and context information, if available, to trigger a configuration, updates and/or activation/deactivation of one or more resource blocks. For example, the arrival probability of safety events may be higher in certain weather conditions (e.g., rain or snow). Also, vehicles may benefit more time to react after receiving V2V safety packet, as it may benefit from more braking time. Further more resources can be provisioned for V2V safety traffic, as such low latency packet delivery may provide vehicles with more time for reaction in one or more bad weather scenarios. Similarly, mid-night time is less demanding, while rush hours are more demanding from V2V safety traffic and therefore resource blocks may be configured accordingly.

The current aspects may dynamically optimize device and network operation. For instance, a higher efficiency of network resources in may be achieved, cooperative communication may be selected for better link robustness, and/or spectrum resources may be dynamically allocated based on device capabilities. Further, network efficiency may be increased by exploring end-to-end communications, which may decrease the burden on the radio communication network **21600** while raising the importance of individual computation within terminal devices.

FIG. **267** shows method **26700** for provisioning radio network resources according to application requirements in accordance with some aspects. As shown in FIG. **267,** method **26700** includes receiving, by a group lead terminal device, a radio network resource block configuration from a network access node, the radio network resource block configuration having a plurality of parameters that are configured to a particular application **(26710),** transmitting, by the group lead terminal device, the radio network resource block configuration to a group member terminal device over a direct communication interface **(26720),** and supporting, by the group lead terminal device, communication between the group member terminal device and the network access node according to the radio network resource block configuration **(26730).**

FIG. **268** shows method **26800** for provisioning radio network resources according to application requirements in accordance with some aspects. As shown in FIG. **268,** method **26800** includes receiving, by a group member terminal device, a radio network resource block configuration from a network access node **(26810),** the radio network resource block configuration having a plurality of parameters that are configured to a particular application, and communicating, by the group member terminal device, according to the radio network resource block configuration **(26820).**

7.7 Hierarchical Communication #7

In some aspects of this disclosure, a hierarchy of capabilities may be used to describe an status of device-to-device communications. For instance, hierarchical levels may be assigned to terminal devices of a radio communication network according to their respective capabilities and relative to specified conditions for vertical applications.

The term vertical may refer to vertical use cases and/or applications, such as automotive, medical, public safety, commercial mobile broadband, etc. Each vertical may be subject to certain conditions, as for instance specific service preferences and/or requirements. Although such conditions may be described as being distinct among verticals in one aspect of the disclosure, these conditions may be the same, distinct or overlapping in other aspects. By way of example, an automotive application may require low latency whereas a public safety application may require high priority.

Verticals may be implemented, in whole or part, by the radio communication network **21600** as a vertical slice. More specifically, the term vertical slice may correspond to one or more parts of the radio communication network **21600.** In one aspect of the disclosure, a vertical slice may correspond to one or more physical parts of radio communication network **21600,** while it may refer to one or more physical and logical parts of the radio communication network **21600** in another. In one example, one or more specific processing elements of the radio communication network **21600** may be allocated to a specific vertical in order to meet its specific service preferences and/or requirements. A majority of the radio communication network **21600** capacity, however, may be allocated to a public safety application and system during a disaster, while capacity for a commercial mobile broadband application and system may be reduced.

A vertical slice relay may correspond to one or more components of the radio communication network **21600** as well. According to one aspect, a vertical slice may refer to one or more subsets of hardware and/or software resources of the radio communication network **21600,** which are allocated to one or more specific verticals. While these systems may be described as being separate from each other in one example, a close integration among vertical applications may be realized in another. In one instance, vertical slices may utilize one or more relays therebetween.

Public safety applications and systems may evolve at a slower pace compared to commercial mobile broadband applications and systems. Consequently, the performance of a public safety application and system is likely to be inferior to a commercial mobile broadband application and system. Overall service quality may, however, be improved by forwarding data according to the confidentiality level associated therewith. For instance, the forwarding of confidential data through a secure public safety application and/or system may improve overall service quality. Likewise, the forwarding of non-confidential data through commercial mobile broadband application and/or system may improve overall service quality.

Wireless communication can be achieved through not only the radio communication network **21600,** but also through short-range communication interfaces between terminal devices. The short-range communication interfaces may be a direct link therebetween, such as a D2D communication link. Even though D2D communication links are described herein, other types of short-range communication interfaces between terminal devices may be utilized, such as Wi-Fi, Bluetooth, and/or Bluetooth Low Energy.

FIG. **269** shows a mobile cloud network **26900** based on D2D communications in accordance with some aspects, which may include terminal devices **26902-26904,** network access node **26910,** terminal devices **26912-26920,** and/or terminal devices **26922-26930.** According to one aspect of the disclosure, terminal devices **26902-26904** may be high performance terminal devices, such as smartphones. In another aspect of the disclosure, terminal devices **26912-26920** may be low performance terminal devices. In yet another aspect of the disclosure, terminal devices **26922-26930** may be ultra-low performance Internet of Things (IoT) terminal devices. For instance, one or more of terminal devices **26922-26930** may include a sensor, such as an IoT medical sensor. The terminal devices within the mobile cloud network **26900** may correspond to terminal device **21602,** and may include modem-layer and/or application-layer processing modules (e.g., in the manner of baseband modem **21706** and/or application processor **21712**) configured to control the communication operations related to any of FIGs. **261-268,** including transmitting and receiving data as radio signals with transceiver and antenna circuitry (e.g., RF transceiver **21704** and antenna system **21702**)**.** Additionally or alternatively, one or more terminal devices, such as terminal devices **26922-26930,** of the mobile cloud network **26900** may not be capable of directly leveraging higher capability networks, such as 3/4/5G networks. The number and type of devices in the mobile cloud network **26900** illustrated in FIG. **269** is merely one example of the disclosure. In another aspect, more or less of these and/or other types of devices may be implemented in the mobile cloud network **26900.**

Terminal devices **26902-26904** may be configured to support a variety of links. For instance, terminal devices **26902-26904** may be configured to support high throughput links, low throughput, low latency D2D links, and/or low throughput, high latency D2D links. Terminal devices **26902-26904** may utilize one or more of the variety of links to communicate with other devices in the mobile cloud network **26900.** For instance, terminal device **26902** may communicate directly with network access node **26910** over a high throughput link according to one aspect of the disclosure. According to one aspect of the disclosure, terminal devices **26902-26904** may be identified as being capable of directly communicating with network access node **26910.**

Terminal devices **26912-26920** may be configured to support a variety of links as well. For instance, terminal devices **26912-26920** may be configured to support low throughput and high latency D2D links and/or ultra-low throughput, ultra-high latency D2D links. Terminal devices **26912-26920** may communicate with other devices of the mobile cloud network **26900** that are located within a short range. For instance, terminal device **26912** and may utilize terminal device **26902** to communicate with the network access node **26910.**

Terminal devices **26922-26930** may be configured to support a variety of links as well. By way of example, terminal devices **26922-26930** may be configured to support ultra-low throughput, ultra-high latency D2D links (e.g., some IoT applications such as livestock monitoring may require only occasional data transmission, e.g., once a day, and may tolerate a delayed transmission, e.g., one hour after sensor measurement). According to one aspect of the disclosure, terminal devices **26922-26930** may not be able to communicate directly with network access node **26910.** Terminal devices **26922-26930** may, however, communicate with other devices of the mobile cloud network **26900** that are located within a short range. For instance, terminal device **26922** may indirectly utilize terminal device **26902** to communicate with the network access node **26910** as shown in FIG. **269.**

The terminal devices of the mobile cloud network **26900** may be assigned to hierarchical levels, which correspond the conditions of one or more verticals. The grouping of devices into hierarchical levels may, for instance, be based the conditions of the verticals, the number of respective devices and/or capabilities of the respective devices (e.g., grouping may be realized by clustering parameters). As a result, the grouping may be heterogeneous or homogeneous in nature.

According to one aspect, a terminal device of the mobile cloud network **26900** may have access to each of the verticals associated with its assigned hierarchical level. For instance, the condition(s) of one vertical may be a subset of the conditions of another vertical associated with a higher hierarchical level. Therefore, a terminal device of the mobile cloud network **26900** assigned to the higher hierarchical level may be enabled to access both of these verticals. Additionally or alternatively, a terminal device of the mobile cloud network **26900** meeting the differing conditions of two or more verticals may be assigned to a hierarchical level that enables access to each of the verticals for which the conditions are met. For simplicity, however, the terminal devices of the mobile cloud network **26900** may be graphically depicted within one or more verticals to better illustrate the application of the hierarchical network.

As shown in FIG. **269,** vertical **A** may include terminal devices **26902-26904,** vertical **B** may include terminal devices **26912-26916,** vertical **C** may include terminal devices **26916-26918** and terminal device **26928,** vertical **D** may include terminal devices **26928-26930,** and vertical **E** may include terminal devices **26922-26926.** Although terminal device **26920** is not grouped within verticals **A-D,** it still may be capable of forwarding data between terminal device **26904** and terminal devices **26928-26930.**

The particular assignment of the devices to verticals **A-D** in the mobile cloud network **26900** of FIG. **269** is merely an illustrative in nature. In another aspect, the number and/or type of device in each vertical may vary based on the conditions of the verticals, the number of respective devices and/or capabilities of the respective devices (e.g., in livestock monitoring of a herd, all sensors performing the same measurements (e.g., fertility, location, etc., could be formed into groups).

FIG. **270** shows a message sequence chart **27000** for setting up a temporary hierarchical network by a network access node in accordance with some aspects. The number and type of hierarchical levels and/or terminal devices illustrated in FIG. **270** is merely one example of this disclosure. For instance, the number of hierarchical levels and terminal devices implemented in the hierarchical network may be more or less than in FIG. **270.** According to one aspect of the disclosure, the hierarchical network may correspond to the mobile cloud network **26900** of FIG. **269,** the network access node may correspond to the network access node **26910** of FIG. **269,** and/or the terminal devices may correspond the terminal devices in the mobile cloud network **26900** of FIG. **269.**

In **27002,** the network access node may decide to set-up the hierarchical network. According to one aspect of the disclosure, this decision may be based on the identification of a communication need. The communication need may refer to a D2D communication, a small-cell communication, a macro-cell communication, etc.

As described below, this identification may be made by implementing a bottom-up approach **27002a** or a top-down approach **27002b.** In a bottom-up approach **27002a,** the identification may be made based on a trigger that is sent from a terminal device to the network access node. The trigger may be, in one instance, a request or proposal to initiate a hierarchical network. In a top-down approach **27002b,** the identification may be made by the network access node. Upon this identification and a decision to set-up the hierarchical network, a number of hierarchal levels in the hierarchical network is then determined.

In **27004,** the network access node may identify the number of hierarchical levels to be used in the hierarchical network. According to one aspect, the number of hierarchical levels may be based at least upon conditions of the vertical and/or user requirements.

In **27006,** the network access node may assign terminal devices of the hierarchical network to an identified level. According to one aspect, the network access node may transmit an indication of an assigned hierarchical level to each of the terminal devices of the hierarchical network. Once assigned to a hierarchical level, a terminal device may communicate with terminal devices of the same hierarchical level ("n"), terminal devices of a lower hierarchical level ("n-1 "), and/or terminal devices of a higher hierarchical level ("n+1") through the hierarchical network.

In **27008,** the network access node may adapt the hierarchical network. According to one aspect, the decision to adapt the hierarchical network may, for instance, be based on one or more parameters, such as channel conditions, and/or capabilities of the terminal devices either collectively or individually. In another aspect, **27008** is optional and may be omitted.

In **27010,** the network access node may terminate the hierarchical network. According to one aspect, the decision to terminate the hierarchical network may be triggered if none of the terminal devices are participating in, for instance, D2D communications.

FIG. **271** shows a method **27100** for communication within a hierarchical network in accordance with some aspects. In one example of the disclosure, the hierarchical network may correspond to the mobile cloud network **26900,** the network access node may correspond to the network access node **26910,** and the terminal devices may correspond a terminal device within the mobile cloud network **26900** of FIG. **269.** Additionally or alternatively, method **27100** may correspond to one or more actions performed by a terminal device in message sequence chart **55005400.**

In **27102,** a first terminal device may trigger a network access node to create the hierarchical network. The trigger may be, in one instance, a request or proposal to create a hierarchical network, which is transmitted to the network access node. The process of **27102,** however, is optional and may be omitted where the network access node decides to create the hierarchical network without receiving such a request or proposal from the first terminal device. For instance, the network access node may decide on its own or with the aid of one or more elements of the radio communication network **21600** and/or a different terminal device to create the hierarchical network.

In **27104,** the first terminal device may receive an indication from the network access node that the first terminal device is assigned to a first hierarchical level. The first hierarchical level may be associated with a first vertical application set enabling access to one or more vertical applications. The assignment to the first hierarchical level may be based on one or more capabilities of the first terminal device. According to one aspect, the capabilities may include a latency and/or data throughput of a supported short range wireless communication interface, such as a D2D link, supported by the first terminal device.

The received indication of the assigned hierarchical level of the first terminal device and/or the first application set may be stored locally in the first terminal device and/or remotely. For instance, the assigned hierarchical level and/or application set associated therewith may be stored in memory **21714** of the first terminal device, and/or a component of the radio communication network **21600.**

In **27106,** the first terminal device may communicate with another terminal device in the hierarchical network. For instance, the first terminal device may communicate with a second terminal device that is assigned to a second hierarchical level, which may be different from the first hierarchical level. The second hierarchical level may be associated with a second vertical application set providing access to one or more vertical applications. The vertical applications associated with the first and second hierarchical levels may include one or more of the same vertical applications. Alternatively, the vertical applications associated with the first and second hierarchical level may be mutually exclusive in that they do not share any of the same vertical applications.

The latency and/or data throughput of the short range wireless communication interface of the first and second terminal devices may be different. According to one aspect, the second terminal device is of a higher hierarchical level than the first terminal device. For instance, the first terminal device may support a D2D link having a latency that is higher than the latency associated with the second terminal device. In additional to or alternatively, first terminal device may support a D2D link having a data throughput that is less than the data throughput associated with the second terminal device.

In another aspect of the disclosure, the first terminal device is of a higher hierarchical level than the second terminal device. For instance, the second terminal device may support a D2D link having a latency that is higher than the latency associated with the first terminal device. Additionally or alternatively, second terminal device may support a D2D link having a data throughput that is less than the data throughput associated with the fist terminal device. In yet another aspect of the disclosure, the first terminal device may be of the same hierarchical level as the second terminal device.

In some aspects, communication between the first and second terminal devices of the hierarchical network may include a discovery process. According to one aspect, the first device may receive information from the second terminal device indicating that it can forward data packets associated with the second application set to the radio access network. Likewise, the first terminal device may transmit information to the second terminal device indicating that it can forward data packets associated with the first application set to the radio access network. Responsive thereto, a request may be transmitted between the first communication device and the second terminal device to forward data packets to the radio access network. In other words, a terminal device may be enabled to access vertical applications, for instance, associated with a higher or lower hierarchical level than which it is assigned.

The received indication of the assigned hierarchical level of the second terminal device and/or the application set associated therewith may be stored locally in the first terminal device and/or remotely. For instance, the assigned hierarchical level may be stored in memory **21714** of the first terminal device, and/or a component of the radio communication network **21600.**

The process of **27106,** however, is optional and may be omitted where the first terminal device communicates with the network access node directly and no other terminal devices within range elect to participate in the hierarchical network.

In **27108,** the first terminal device may transmit packets to the radio access network. According to one aspect, the first terminal device may transmit data packets to another terminal device in the hierarchical network, which may be relayed to the radio access network. The selection of a terminal device that may be used to access the radio access network may be configured and stored within the first terminal device. For instance, the first terminal device may be configured to forward data packets to the radio access network through terminal devices of an equal or higher hierarchical level. In the case that no equal or higher hierarchical level terminal devices are within a range, the first terminal device may accept a lower hierarchy neighboring terminal device despite a degradation of quality of service or the like.

In one example, the first terminal device may transmit data packets to the second terminal device over a D2D communication link therebetween. For instance, the data packets transmitted by the first terminal device may be associated with the first application set, the second application set, an application set corresponding to a lower hierarchical level, and/or an application set corresponding to a higher hierarchical level. The data packets may originate from the first terminal device, a terminal device of a lower hierarchical level, or a terminal device of a higher hierarchical level. The second terminal device may communicate directly or indirectly with the network access node in forwarding the data packets received from the first terminal device to the radio access network.

In **27110,** the first terminal device may receive data packets through the hierarchical network. According to one aspect of the disclosure, the first terminal device may receive data packets directly from the network access node. In another aspect of the disclosure the first terminal device may receive data packets from an intermediary terminal device, such as the second terminal device over a D2D communication link therebetween. The data packets received by the first terminal device may be addressed to and terminate at the first terminal device, a terminal device of a lower hierarchical level, or a terminal device of a higher hierarchical level.

In **27112,** the first terminal device may receive an indication of a hierarchical level change from the first hierarchical level to another hierarchical level from the network access node. The process of **27112** is optional, and may be omitted a hierarchical level change is not made in the hierarchical network. Although illustrated sequentially, **27108-27112** are presented in sequence, the may occur in any sequence or repeat according to the hierarchical network.

In **27114,** the first terminal device may receive an indication that the hierarchical level is terminated.

By implementing one or more of the current aspects, device and network operation may be improved (e.g., optimized). For instance, a heterogeneous architecture with a higher efficiency may be achieved, cooperative communication may be selected for better link robustness, and/or spectrum resources may be dynamically allocated based on device capabilities. Further, network efficiency may be increased by exploring end-to-end communications, which may decrease the burden on the radio communication network **21600** while raising the importance of individual computation within terminal devices.

FIG. **272** shows method **27200** for communication in a hierarchical network in accordance with some aspects. As shown in FIG. **272,** method **27200** includes receiving, at a first terminal device of a plurality of terminal devices, an indication that the first terminal device is assigned to a first hierarchical level associated with a first application set **(27210),** communicating with a second terminal device of the plurality of terminal devices, the second terminal device being assigned to a second hierarchical level associated with a second application set **(27220),** and transmitting a data message to a radio access network based on the communicating with the second terminal device **(27230).**

7.8 Hierarchical Communication #8

In some aspects of this disclosure, a hierarchy of capabilities may be used to dynamically update an status of device-to-device communications. For instance, hierarchical levels may be assigned to terminal devices of a radio communication network and dynamically changed according to one or more parameters.

Wireless communication can be achieved through not only the radio communication network **21600,** but also through short-range communication interfaces between terminal devices. The short-range communication interfaces may be a direct link therebetween, such as a D2D communication link. Even though D2D communication links are described herein, other types of short-range communication interfaces between terminal devices may be utilized, such as Wi-Fi, Bluetooth, and/or Bluetooth Low Energy.

FIG. **273** shows a mobile cloud network **27300** based on D2D communications in accordance with some aspects. The mobile cloud network 5700 may include terminal devices **27302-27304,** network access node **27310,** terminal devices **27312-27320,** and/or terminal devices **27322-27330.** According to one aspect, terminal devices **27302-27304** may be high performance terminal devices (e.g., a laptop, a tablet, etc.). In another aspect of the disclosure, terminal devices **27312-27320** may be low performance terminal devices (e.g., IoT devices used in factory automation continuously measuring and transmitting data per second, minute, etc.). In yet another aspect of the disclosure, terminal devices **27322-27330** may be ultra-low performance terminal devices (e.g., IoT devices used in livestock monitoring measuring and transmitting data once or only a few times per day). The terminal devices within the mobile cloud network **27300** may correspond to terminal device **21602** of FIG. **217,** and may include modem-layer and/or application-layer processing module (e.g., in the manner of baseband modem **21706** and/or application processor **21712**) configured to control the communication operations related the current aspects, including transmitting and receiving data as radio signals with transceiver and antenna circuitry (e.g., RF transceiver **21704** and antenna system **21702**). Additionally or alternatively, one or more terminal devices, such as terminal devices **27322-27330,** of the mobile cloud network **27300** may not be capable of directly leveraging higher capability networks such as 3/4/5G networks. The number and type of devices in the mobile cloud network **27300** illustrated in FIG. **273** is merely one example of the disclosure. In another aspect, more or less of these and/or other types of devices may be implemented in the mobile cloud network **27300.**

Terminal devices **27302-27304** may be configured to support a variety of links. For instance, terminal devices **27302-27304** may be configured to support high throughput links, low throughput, low latency D2D links, and/or low throughput, high latency D2D links. Terminal devices **27302-27304** may utilize one or more of the variety of links to communicate with other devices in the mobile cloud network **27300.** For instance, terminal device **27302** may communicate directly with network access node **27310** over a high throughput link according to one aspect of the disclosure. According to one aspect of the disclosure, terminal devices **27302-27304** may be identified as being capable of directly communicating with network access node **27310.**

Terminal devices **27312-27320** may be configured to support a variety of links as well. For instance, terminal devices **27312-27320** may be configured to support low throughput and high latency D2D links and/or ultra-low throughput, ultra-high latency D2D links. Terminal devices **27312-27320** may communicate with other devices of the mobile cloud network **27300** that are located within a short range. For instance, terminal device **27312** and may utilize terminal device **27302** to communicate with the network access node **27310.**

Terminal devices **27322-27330** may be configured to support a variety of links as well. By way of example, terminal devices **27322-27330** may be configured to support ultra-low throughput, ultra-high latency D2D links. According to one aspect, terminal devices **27322-27330** may not be able to communicate directly with network access node **27310.** Terminal devices **27322-27330** may, however, communicate with other devices of the mobile cloud network **27300** that are located within a short range. For instance, terminal device **27322** and may indirectly utilize terminal device **27302** to communicate with the network access node **27310** as shown in FIG. **273.**

The terminal devices of the mobile cloud network **27300** may be assigned to hierarchical levels, which correspond the conditions of one or more verticals. The grouping of devices into hierarchical levels may, for instance, be based the conditions of the verticals, the number of respective devices and/or capabilities of the respective devices. As a result, the grouping may be heterogeneous or homogeneous in nature.

According to one aspect of the disclosure, a terminal device of the mobile cloud network **27300** may have access to one or more of the verticals associated with its assigned hierarchical level. For instance, the condition(s) of one vertical may be a subset of the conditions of another vertical associated with a higher hierarchical level. Therefore, a terminal device of the mobile cloud network **27300** assigned to the higher hierarchical level, may be enabled to access both of these verticals. Additionally or alternatively, a terminal device of the mobile cloud network **27300** meeting the differing conditions of two or more verticals may be assigned to a hierarchical level that enables access to each of the verticals for which the conditions are met.

The deployment of communication interfaces in mobile cloud network **27300** may be static, quasi static, or dynamic. According to one aspect, the D2D communication links may be static and thus not adapted. For instance, D2D communication links between robots within an industrial automation environment may be fixed. In another aspect, the D2D links may be quasi static and therefore infrequently changed. In yet another aspect, the D2D links may be dynamically changed. In one example, D2D communication links between drones or other terminal devices having a high mobility status may constantly evolve if, for example, a more favorable D2D communication link becomes possible when a new terminal device moves within range. Handovers between D2D communication links may be dynamically initiated to accommodate more favorable D2D communication links.

FIG. **274** shows a message sequence chart **27400** for dynamically changing a hierarchical network by a network access node in accordance with some aspects. According to one aspect, the message sequence chart **27400** may correspond to **27008** of FIG. **270,** the hierarchical network may correspond to the mobile cloud network **27300** of FIG. **273,** the network access node may correspond to the network access node **27310** of FIG. **273** and/or the terminal devices may correspond to the terminal devices in the mobile cloud network **27300** of FIG. **273.**

In **27402,** the network access node may identify a need to change a hierarchical level of one or more terminal devices of the hierarchical network. According to one aspect, the timing of **27402** may occur periodically, at pre-determined intervals, at random intervals, and/or in response to a network event, such as a power failure of a neighboring network access node. As described below, this identification may be made by implementing a bottom-up approach **27402a** or a top-down approach **27402b.**

In a bottom-up approach **27402a,** the identification may be made based on a trigger that is sent from a terminal device to the network access node. The trigger may be, in one instance, a request or proposal to modify the hierarchical network. In another instance, the trigger may be based on one or more parameters of the terminal device, such one or more operational parameters of the terminal device. Operational parameters of the terminal device may, for example, include a key performance indicator (KPI) of the terminal device, a location of the terminal device, a network subscription of the terminal device, a target (e.g., by a user) QoS of the terminal device, a battery level of the terminal device, a mobility status of the terminal device, a channel condition of the terminal device, a capability of the terminal device, and/or an operating mode of the terminal device, etc. For instance, a terminal device acting as a relay point to the network access node may switch from a high capability mode to a low capability mode in the event its battery level falls below a predetermined threshold. Responsive thereto, the terminal device may transmit a trigger indicative of the low capability mode to the network access node. Upon receiving a trigger from a terminal device, the network access node may decide to change one or more communications links in the hierarchical network by itself or with the aid of one or more elements of the radio communication network **21600.**

In a top-down approach **27002b,** the identification may be made based on network status and/or one or more network parameters. Network parameters may refer to one or more operational parameters of the radio communication network **21600** and/or parameters of the hierarchical network. Additionally, or alternatively, the number of terminal devices and/or average throughput requirements, etc. may be taken into consideration. Operational parameters of the network may include, for example, key performance indicators and/or averaged channel conditions of the network. In one aspect, the network access node may aggregate operational parameters of one or more of the terminal devices. Upon analyzing, the network access node may decide to change one or more communications links in the hierarchical network by itself or with the aid of one or more elements of the radio communication network **21600.**

Upon such deciding to change one or more communication links in the hierarchical network may be made, and the number of hierarchal levels in the hierarchical network also be optionally re-determined.

In **27404,** the network access node may dynamically adapt the hierarchical network. For instance, the network access node may assign one or more terminal devices of the hierarchical network to a hierarchical level. The one or more terminal devices may be new to the hierarchical network or previously unassigned to a hierarchical level. The network access node may also reassign one or more terminal devices from their assigned hierarchical level(s) to new hierarchical level(s). The network access node may further remove one or more terminal devices from their respectively assigned hierarchical level. According to one aspect of the disclosure, the network access node may transmit an indication of a hierarchical level change the terminal devices whose hierarchical level(s) are changed. Once assigned and/or reassigned to a hierarchical level, a terminal device may communicate with terminal devices of the same hierarchical level ("n"), terminal devices of a lower hierarchical level ("n-1"), and/or terminal devices of a higher hierarchical level ("n+1") through the hierarchical network.

In **27406,** the network access node may confirm the hierarchical change with other terminal devices of the hierarchical network which are impacted. For instance, the network access node may transmit an indication of the hierarchical change to one or more terminal devices of the hierarchical network whose communication links are affected.

FIGS. **275** and **276** show the effect of a hierarchical change on the mobile cloud network **27300** of FIG. 27357 in accordance with some aspects. According to one aspect, mobile cloud network **27300** may have been updated according to message sequence chart **27400** of FIG. **274.** The hierarchical changes and effects thereof illustrated in FIGS. **275** and **276** are merely examples of the number and/or types of hierarchical changes that may be made.

FIG. **275** illustrates the mobile cloud network **27300** after reassigning terminal device **27302** from a higher hierarchical level to a lower hierarchical level in accordance with some aspects. According to one aspect, terminal device **27302** may be demoted to a lower hierarchical level in response to an impairment with respect to terminal device **27302.** For instance, when the battery level of terminal device **27302** meets or falls below a predetermined threshold, terminal device **27302** may transmit a trigger to network access node **27310** requesting to be moved to a lower hierarchical level. If approved, for example, by network access node **27310,** an indication of the hierarchical level change from the higher hierarchical level to the lower hierarchical level may be transmitted to terminal device **27302.** The network access node may also transmit a confirmation of the hierarchical level change to terminal device **27304** since its communication link with terminal device **27302** may be reconfigured.

As a result of being reassigned to a lower hierarchical level, one or more communication links may be updated. In one example, terminal device **27302** might not be able to directly communicate with network access node **27310.** Instead, terminal device **27302** may reconfigure a communication link with terminal device **27304** to relay a data to network access node **27310.** For instance, the communication link between terminal device **27302** and terminal device **27304** may be changed from a low throughput, low latency D2D links to a low throughput, high latency D2D link.

FIG. **276** illustrates the mobile cloud network **27300** after reassigning terminal device **27320** from a lower hierarchical level to a higher hierarchical level. According to one aspect of the disclosure, terminal device **27320** may be promoted to a higher hierarchical level in response to an improvement with respect to terminal device **27320.** In one instance, the network access node may itself identify a higher throughput requirement of the mobile cloud network **27300** and thus promote terminal device **27320** to a higher hierarchical level. In another instance, when the channel conditions of terminal device **27320** meet or exceed a predetermined threshold, terminal device **27302** may transmit a trigger to network access node **27310** requesting to be moved to a higher hierarchical level. If approved, for example, by network access node **27310,** an indication of the hierarchical level change from the lower hierarchical level to the higher hierarchical level may be transmitted to terminal device **27320.** The network access node may also transmit a confirmation of the hierarchical level change to terminal device **27302,** terminal device **27304,** and terminal device **27322** since at least one of their respective communication links may be reconfigured.

As a result of being reassigned to a higher hierarchical level, one or more new communication links may be established. In one example, terminal device **27320** may be able to directly communicate with network access node **27310.** For instance, terminal device **27320** may be configured to establish a high throughput link with network access node **27310.** In another example, terminal device **27320** may be able to relay data between terminal device **27318** and network access node **27310.** As such, terminal device **27320** may be configured to establish a low throughput, high latency D2D link with terminal device **27318.**

As a result of being reassigned to a higher hierarchical level, one or more existing communication links may be reconfigured. In one example, terminal device **27320** may reconfigure an existing communication link with terminal device **27304.** For instance, the communication link between terminal device **27320** and terminal device **27304** may be changed from a low throughput, high latency D2D link to a low throughput, low latency D2D link.

As a result of being reassigned to a higher hierarchical level, one or more existing communication links may be removed. In one example, the communication link between terminal device **27318** and terminal device **27304** may be removed since it may be more favorable for terminal device **27320** to relay data between terminal device **27318** and network access node **27310.** For instance, terminal device **27320** may provide a more efficient communication link than terminal device **27304** if terminal device **27320** is closer to terminal device **27318** than terminal device **27304.**

FIG. **277** shows a method **27700** for dynamic communication within a hierarchical network. According to one aspect of the disclosure, the hierarchical network may correspond to the mobile cloud network **27300,** the network access node may correspond to the network access node **27310,** and the terminal devices may correspond to a terminal device within the mobile cloud network **27300** of FIG. **273.** Additionally or alternatively, method **27700** may correspond to one or more actions performed by a terminal device of message sequence chart **27400.**

In **27702,** a first terminal device may trigger a network access node to modify the hierarchical network. The trigger may be, in one instance, a request or proposal to modify the hierarchical network, which is transmitted to the network access node. The trigger may be based on one or more operational parameters of the first terminal device. Operational parameters of the first terminal device may, for example, include a key performance indicator of the terminal device, a location of the first terminal device, a network subscription of the terminal device, a target (e.g., by a user) QoS of the terminal device, a battery level of the first terminal device, a mobility status of the first terminal device, a channel condition of the first terminal device, a capability of the first terminal device, and/or an operating mode of the first terminal device, etc. **27702**

The process of **27602,** however, is optional and may be omitted where the network access node decides to modify the hierarchical network without receiving a request or proposal from the first terminal device. For instance, the network access node may decide on its own or with the aid of one or more elements of the radio communication network **21600** and/or a different terminal device to modify the hierarchical network.

In **27704,** the first terminal device may receive an indication from the network access node of a hierarchical level change. The hierarchical level change may indicate that the first terminal device is reassigned from a first hierarchical level to a second hierarchical level, or removed from a hierarchical level assigned to the first terminal device.

The first hierarchical level may be associated with a first vertical application set enabling access to one or more vertical applications, whereas the second hierarchical level may be associated with a second vertical application set enabling access to one or more vertical applications. In one example, the first hierarchical level may higher than the second hierarchical level. In another example, the second hierarchical level may be higher than the first hierarchical level. Additionally or alternatively, the hierarchical level change may indicate one or more communication links of the first terminal device with another terminal device is reconfigured, added, and/or removed.

The received indication of the hierarchical level change of the first terminal device may be stored locally in the first terminal device and/or remotely. For instance, the assigned hierarchical level and/or application set associated therewith may be stored in memory **21714** of the first terminal device of FIG. **217,** and/or a component of the radio communication network **21600.**

In **27706,** the first terminal device may communicate with another terminal device in the hierarchical network. For instance, the first terminal device may communicate with a second terminal device that is assigned to a third hierarchical level, which may be different from the first hierarchical level. The third hierarchical level may be associated with a third vertical application set providing access to one or more vertical applications.

The vertical applications associated with the first, second and third hierarchical levels may include one or more of the same vertical applications. Alternatively, the vertical applications associated with the first, second and third hierarchical levels may be mutually exclusive in that they do not share any of the same vertical applications.

The latency and/or data throughput of the short range wireless communication interface of the first and second terminal devices may be different. According to one aspect, the second terminal device is of a higher hierarchical level than the first terminal device. For instance, the first terminal device may support a D2D link having a latency that is higher than the latency associated with the second terminal device. In additional to or alternatively, first terminal device may support a D2D link having a data throughput that is less than the data throughput associated with the second terminal device.

In another aspect, the first terminal device is of a higher hierarchical level than the second terminal device. For instance, the second terminal device may support a D2D link having a latency that is higher than the latency associated with the first terminal device. In additional to or alternatively, second terminal device may support a D2D link having a data throughput that is less than the data throughput associated with the fist terminal device. In yet another aspect of the disclosure, the first terminal device may be of the same hierarchical level as the second terminal device

Communication between the first and second terminal devices of the hierarchical network may include a discovery process. According to one aspect of the present disclosure, the first device may receive information from the second terminal device indicating that it can forward data packets associated with the third application set to the radio access network. Likewise, the first terminal device may transmit information to the second terminal device indicating that it can forward data packets associated with the second application set to the radio access network. Responsive thereto, a request may be transmitted between the first communication device and the second terminal device to forward data packets to the radio access network. In other words, a terminal device may be enabled to access vertical applications, for instance, associated with a higher or lower hierarchical level than which it is assigned.

The received indication of the assigned hierarchical level of the second terminal device and/or the application set associated therewith may be stored locally in the first terminal device and/or remotely. For instance, the assigned hierarchical level may be stored in memory **21714** of the first terminal device of FIG. **217,** and/or a component of the radio communication network **21600.**

The process of **27706,** however, is optional and may be omitted where the first terminal device communicates with the network access node directly and no other terminal devices within range elect to participate in the hierarchical network.

In **27708,** the first terminal device may transmit packets to the radio access network. According to one aspect, the first terminal device may transmit data packets to another terminal device in the hierarchical network, which may be relayed to the radio access network. The selection of a terminal device that may be used to access the radio access network may be configured and stored within the first terminal device. For instance, the first terminal device may be configured to forward data packets to the radio access network through terminal devices of an equal or higher hierarchical level. In the case that no equal or higher hierarchical level terminal devices are within a range, the first terminal device may accept a lower hierarchy neighboring terminal device despite a degradation of quality of service or the like.

In one example, the first terminal device may transmit data packets to the second terminal device over a D2D communication link therebetween. For instance, the data packets transmitted by the first terminal device may be associated with the first application set, the second application set, the third application set, an application set corresponding to a lower hierarchical level, and/or an application set corresponding to a higher hierarchical level. The data packets may originate from the first terminal device, a terminal device of a lower hierarchical level, or a terminal device of a higher hierarchical level. The second terminal device may communicate directly or indirectly with the network access node in forwarding the data packets received from the first terminal device to the radio access network.

In **27710,** the first terminal device may receive data packets through the hierarchical network. According to one aspect, the first terminal device may receive data packets directly from the network access node. In another aspect of the disclosure the first terminal device may receive data packets from an intermediary terminal device, such as the second terminal device over a D2D communication link therebetween. The data packets received by the first terminal device may be addressed to and terminate at the first terminal device, a terminal device of a lower hierarchical level, or a terminal device of a higher hierarchical level.

In **27712,** the first terminal device may receive another indication of a hierarchical level change from the first hierarchical level to another hierarchical level from the network access node. The process of **27712** is optional, and may be omitted a hierarchical level change is not made in the hierarchical network. Although illustrated sequentially, **27708-27712** are presented in sequence, the may occur in any sequence or repeat according to the hierarchical network.

In **27714,** the first terminal device may receive an indication that the hierarchical level is terminated.

The current aspects may optimize device and network operation. For instance, a heterogeneous architecture with a higher efficiency may be achieved, cooperative communication may be selected for better link robustness, and/or spectrum resources may be dynamically allocated based on device capabilities. Further, network efficiency may be increased by exploring end-to-end communications, which may decrease the burden on the radio communication network **21600** while raising the importance of individual computation within terminal devices.

FIG. **278** shows method **27800** for dynamic communication over a radio access network in accordance with some aspects. As shown in FIG. **278,** method **27800** includes receiving, at a first terminal device of a plurality of terminal devices **(27810),** an indication that the first terminal is assigned to a first hierarchical level, receiving, at a first terminal device, a first hierarchical level change indicating the first terminal device is reassigned from the first hierarchical level to a second hierarchical level **(27820),** based on an operational parameter, and transmitting a data message to the radio access network based on the first hierarchical level change **(27830).**

The terms "user equipment", "UE", "mobile terminal", "user terminal", etc., may apply to any wireless communication device, including cellular phones, tablets, laptops, personal computers, wearables, multimedia playback and other handheld electronic devices, consumer/home/office/commercial appliances, vehicles, and any number of additional electronic devices capable of wireless communications.

While the above descriptions and connected figures may depict electronic device components as separate elements, skilled persons will appreciate the various possibilities to combine or integrate discrete elements into a single element. Such may include combining two or more hardware circuits for form a single hardware circuit, mounting two or more hardware circuits onto a common chip or chassis to form an integrated element, executing discrete software routines (e.g., programs, algorithms, or applications) on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software routine into two or more sub-routings and executing each subroutine separately (on the same or different processor cores).

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

**1.** A non-transitory computer readable medium storing instructions that, when executed by one or more processors (15912) of a communication device (13602), cause the one or more processors (15912) to perform the steps of:

determining that the communication device (13602) is in a scenario when a battery power of the communication device (13602) falls below a battery power threshold;

classifying, data from one or more applications (15908, 15910) of the communication device (13602) into a plurality of priorities, wherein classifying data into the plurality of priorities comprises classifying data from a highest priority to a lowest priority based on use of the one or more applications (15908, 15910) during an extended time period;

throttling the data from the one or more applications (15908, 15910) based on their respective priorities while the communication device (13602) is in the scenario, wherein throttling the data comprises transmitting the lowest priority data with a longer transmission delay than the highest priority data; and

terminating the throttling when the communication device (13602) exits the scenario, wherein the communication device (13602) is determined to have exited the scenario when at least one of: the battery power rises above the battery power threshold, the battery power rises above a second battery power threshold, and/or the communication device (13602) is connected to a charging power supply.

**2.** The non-transitory computer readable medium of claim 1, wherein the scenario is a power-constrained scenario.

3. The non-transitory computer readable medium of claims 1 or 2, wherein throttling the data from the one or more applications (15908, 15910) comprises throttling data of a first priority at a first level and throttling data of a second priority at a second level.

4. The non-transitory computer readable medium of any one of claims 1 to 3, wherein classifying data into a plurality of priorities comprises classifying a messaging service as priority traffic; classifying data according to user-inputted rankings or classifying data based on user usage.

5. The non-transitory computer readable medium of any one of claims 1 to 4, wherein the wherein classifying data into the plurality of priorities comprises classifying data based on whether the data is realtime traffic data or non-realtime traffic data.

6. The non-transitory computer readable medium of claim 5, wherein throttling the data comprises transmitting the data classified as non-critical traffic with the longer transmission delay than the data that is not user-priority traffic or the data that is not realtime traffic.

7. The non-transitory computer readable medium of any one of claims 1 to 6, wherein classifying data from one or more applications (15908, 15910) of the communication device (13602) into a plurality of priorities comprises classifying the data at an application processor of the communication device (13602), wherein the application processor is configured to execute the one or more applications (15908, 15910).

8. The non-transitory computer readable medium of any one of claims 1 to 7, wherein throttling the data from the one or more applications (15908, 15910) at varying levels based on their respective priorities while the communication device (13602) is in the scenario comprises throttling the lowest-priority traffic at a modem driver; throttling the lowest-priority traffic at a baseband modem.

9. The non-transitory computer readable medium of any one of claims 1 to 8, wherein the throttling the data comprises throttling application data sync procedures by discontinuing sending periodic sync requests.

10. A communication device (13602) comprising:

a detection circuit (15906) configured to determine that the communication device (13602) is in a scenario when a battery power of the communication device (13602) falls below a battery power threshold;
a classification circuit (15904) configured to classify data from one or more applications (15908, 15910) of the communication device (13602) into a plurality of priorities, wherein the classification circuit (15904) is configured to classify data from a highest priority to a lowest priority based on use of the one or more applications (15908, 15910) during an extended time period; and
a traffic control circuit (15902) configured to throttle the data from the one or more applications (15908, 15910) based on their respective priorities while the communication device (13602) is in the scenario, wherein the traffic control circuit (15902) is configured to transmit the lowest priority data with a longer transmission delay than the highest priority data, wherein the traffic control circuit (15902) is further configured to terminate the throttling when the communication device (13602) exits the scenario, wherein the communication device (13602) is determined to have exited the scenario when at least one of: the battery power rises above the battery power threshold, the battery power rises above a second battery power threshold, and/or the communication device (13602) is connected to a charging power supply.

11. A method of reducing power consumption comprising:

determining that the communication device (13602) is in a scenario when a battery power of the communication device (13602) falls below a battery power threshold;
classifying, data from one or more applications (15908, 15910) of the communication device (13602) into a plurality of priorities, wherein classifying data into the plurality of priorities comprises classifying data from a highest priority to a lowest priority based on use of the one or more applications (15908, 15910) during an extended time period;
throttling the data from the one or more applications (15908, 15910) based on their respective priorities while the communication device (13602) is in the scenario, wherein throttling the data comprises transmitting the lowest priority data with a longer transmission delay than the highest priority data; and
terminating the throttling when the communication device (13602) exits the scenario, wherein the communication device (13602) is determined to have exited the scenario when at least one of: the battery power rises above the battery power threshold, the battery power rises above a second battery power threshold, and/or the communication device (13602) is connected to a charging power supply.

**Patentansprüche**

1. Nicht-transitorisches computerlesbares Medium, das Anweisungen speichert, die dann, wenn sie durch einen oder mehrere Prozessoren (15912) einer Kommunikationsvorrichtung (13602) ausgeführt werden, den einen oder die mehreren Prozessoren (15912) dazu veranlassen, die folgenden Schritte auszuführen:

   Bestimmen, dass sich die Kommunikationsvorrichtung (13602) in einem Szenario befindet, in dem die Batterieleistung der Kommunikationsvorrichtung (13602) unter einen Batterieleistungs-Schwellenwert fällt;
   Klassifizieren von Daten von einer oder von mehreren Anwendungen (15908, 15910) der Kommunikationsvorrichtung (13602) in mehrere Prioritäten, wobei das Klassifizieren von Daten in die mehreren Prioritäten das Klassifizieren von Daten von einer höchsten Priorität zu einer niedrigsten Priorität anhand der Verwendung der einen oder der mehreren Anwendungen (15908, 15910) während einer ausgedehnten Zeitperiode umfasst;
   Drosseln der Daten von der einen oder den mehreren Anwendungen (15908, 15910) anhand ihrer jeweiligen Prioritäten, während sich die Kommunikationsvorrichtung (13602) in dem Szenario befindet, wobei das Drosseln der Daten das Senden der Daten mit niedrigster Priorität mit einer längeren Sendeverzögerung als das Senden der Daten mit der höchsten Priorität umfasst; und
   Beenden des Drosselns, wenn die Kommunikationsvorrichtung (13602) das Szenario verlässt, wobei für die Kommunikationsvorrichtung (13602) bestimmt wird, dass sie das Szenario verlassen hat, wenn die Batterieleistung über den Batterieleistungs-Schwellenwert steigt und/oder die Batterieleistung über einen zweiten Batterieleistungs-Schwellenwert steigt und/oder die Kommunikationsvorrichtung (13602) mit einer Lade-Leistungsversorgung verbunden ist.

2. Nicht-transitorisches computerlesbares Medium nach Anspruch 1, wobei das Szenario ein Szenario mit beschränkter Leistung ist.

3. Nicht-transitorisches computerlesbares Medium nach den Ansprüchen 1 oder 2, wobei das Drosseln der Daten von der einen oder den mehreren Anwendungen (15908, 15910) das Drosseln von Daten mit einer ersten Priorität auf einem ersten Niveau und das Drosseln von Daten mit einer zweiten Priorität auf einem zweiten Niveau umfasst.

4. Nicht-transitorisches computerlesbares Medium nach einem der Ansprüche 1 bis 3, wobei das Klassifizieren von Daten in mehrere Prioritäten das Klassifizieren eines Nachrichtendienstes als Verkehr mit Priorität; das Klassifizieren von Daten in Übereinstimmung mit vom Anwender eingegebenen Rangfolgen oder das Klassifizieren von Daten anhand einer Verwendung durch den Anwender umfasst.

5. Nicht-transitorisches computerlesbares Medium nach einem der Ansprüche 1 bis 4, wobei das Klassifizieren von Daten in die mehreren Prioritäten das Klassifizieren von Daten anhand der Tatsache, ob die Daten Daten von Echtzeit-Verkehr oder Daten von Nicht-Echtzeit-Verkehr sind.

6. Nicht-transitorisches computerlesbares Medium nach Anspruch 5, wobei das Drosseln der Daten das Senden der Daten, die als nicht kritischer Verkehr klassifiziert werden, mit der längeren Sendeverzögerung als das Senden der Daten, die keinen Verkehr mit Anwenderpriorität darstellen, oder der Daten, die kein Nicht-Echtzeit-Verkehr sind, umfasst.

7. Nicht-transitorisches computerlesbares Medium nach einem der Ansprüche 1 bis 6, wobei das Klassifizieren von Daten von einer oder mehreren Anwendungen (15908, 15910) der Kommunikationsvorrichtung (13602) in mehrere Prioritäten das Klassifizieren der Daten bei einem Anwendungsprozessor der Kommunikationsvorrichtung (13602) umfasst, wobei der Anwendungsprozessor konfiguriert ist, die eine oder die mehreren Anwendungen (15908, 15910) auszuführen.

8. Nicht-transitorisches computerlesbares Medium nach einem der Ansprüche 1 bis 7, wobei das Drosseln der Daten von der einen oder den mehreren Anwendungen (15908, 15910) auf verschiedenen Niveaus anhand ihrer jeweiligen Prioritäten, während sich die Kommunikationsvorrichtung (13602) in dem Szenario befindet, das Drosseln des Verkehrs mit niedrigster Priorität bei einem Modem-Treiber und das Drosseln des Verkehrs mit niedrigster Priorität bei einem Grundband-Modem umfasst.

**9.** Nicht-transitorisches computerlesbares Medium nach einem der Ansprüche 1 bis 8, wobei das Drosseln der Daten das Drosseln von Anwendungsdaten-Synchronisationsprozeduren durch Unterbrechen des Sendens periodischer Synchronisationsanforderungen umfasst.

**10.** Kommunikationsvorrichtung (13602), die Folgendes umfasst:

eine Detektionsschaltung (15906), die konfiguriert ist, zu bestimmen, dass sich die Kommunikationsvorrichtung (13602) in einem Szenario befindet, in dem eine Batterieleistung der Kommunikationsvorrichtung (13602) unter einen Batterieleistungs-Schwellenwert fällt;
eine Klassifizierungsschaltung (15904), die konfiguriert ist, Daten von einer oder mehreren Anwendungen (15908, 15910) der Kommunikationsvorrichtung (13602) in mehrere Prioritäten zu klassifizieren, wobei die Klassifizierungsschaltung (15904) konfiguriert ist, Daten von einer höchsten Priorität zu einer niedrigsten Priorität anhand der Verwendung der einen oder der mehreren Anwendungen (15908, 15910) während einer ausgedehnten Zeitperiode zu klassifizieren; und
eine Verkehrssteuerschaltung (15902), die konfiguriert ist, die Daten von der einen oder den mehreren Anwendungen (15908, 15910) anhand ihrer jeweiligen Prioritäten zu drosseln, während sich die Kommunikationsvorrichtung (13602) in dem Szenario befindet, wobei die Verkehrssteuerschaltung (15902) konfiguriert ist, die Daten mit der niedrigsten Priorität mit einer längeren Sendeverzögerung als die Daten mit der höchsten Priorität zu senden, wobei die Verkehrssteuerschaltung (15902) ferner konfiguriert ist, das Drosseln zu beenden, wenn die Kommunikationsvorrichtung (13602) das Szenario verlässt, wobei für die Kommunikationsvorrichtung (13602) bestimmt wird, dass sie das Szenario verlassen hat, wenn die Batterieleistung über den Batterieleistungs-Schwellenwert ansteigt und/oder wenn die Batterieleistung über einen zweiten Batterieleistungs-Schwellenwert ansteigt und/oder wenn die Kommunikationsvorrichtung (13602) mit einer Lade-Leistungsversorgung verbunden ist.

**11.** Verfahren zum Verringern des Leistungsverbrauchs, das Folgendes umfasst:

Bestimmen, dass sich eine Kommunikationsvorrichtung (13602) in einem Szenario befindet, in dem eine Batterieleistung der Kommunikationsvorrichtung (13602) unter einen Batterieleistungs-Schwellenwert fällt;
Klassifizieren von Daten von einer oder mehreren Anwendungen (15908, 15910) der Kommunikationsvorrichtung (13602) in mehrere Prioritäten, wobei das Klassifizieren von Daten in die mehreren Prioritäten das Klassifizieren von Daten von einer höchsten Priorität zu einer niedrigsten Priorität anhand der Verwendung der einen oder der mehreren Anwendungen (15908, 15910) während einer ausgedehnten Zeitperiode umfasst;
Drosseln der Daten von der einen oder den mehreren Anwendungen (15908, 15910) anhand ihrer jeweiligen Prioritäten, während sich die Kommunikationsvorrichtung (13602) in dem Szenario befindet, wobei das Drosseln der Daten das Senden der Daten mit der niedrigsten Priorität mit einer längeren Sendeverzögerung als das Senden der Daten mit der höchsten Priorität umfasst; und
Beenden des Drosselns, wenn die Kommunikationsvorrichtung (13602) das Szenario verlässt, wobei für die Kommunikationsvorrichtung (13602) bestimmt wird, dass sie das Szenario verlassen hat, wenn die Batterieleistung über den Batterieleistungs-Schwellenwert ansteigt und/oder die Batterieleistung über einen zweiten Batterieleistungs-Schwellenwert steigt und/oder die Kommunikationsvorrichtung (13602) mit einer Lade-Leistungsversorgung verbunden ist.

## Revendications

**1.** Support lisible par ordinateur non transitoire stockant des instructions qui, lorsqu'elles sont exécutées par un ou plusieurs processeurs (15912) d'un dispositif de communication (13602), forcent les un ou plusieurs processeurs (15912) à réaliser les étapes de :

détermination du fait que le dispositif de communication (13602) est dans un scénario lorsqu'une puissance de batterie du dispositif de communication (13602) chute en-deçà d'un seuil de puissance de batterie ;
classification des données en provenance d'une ou de plusieurs applications (15908, 15910) du dispositif de communication (13602) selon une pluralité de priorités, dans lequel la classification des données selon la pluralité de priorités comprend la classification des données depuis une priorité la plus élevée jusqu'à une priorité la plus faible sur la base de l'utilisation des une ou plusieurs applications (15908, 15910) pendant une période temporelle étendue ;
régulation des données en provenance des une ou plusieurs applications (15908, 15910) sur la base de leurs priorités respectives tandis que le dispositif de communication (13602) est dans le scénario, dans lequel la régulation des données comprend la transmission des données de priorité la plus faible selon un retard de transmission plus long que les données de priorité la plus élevée ; et
l'arrêt de la régulation lorsque le dispositif de communication (13602) sort du scénario, dans lequel le dispositif de communication (13602) est déterminé comme étant sorti du scénario lorsqu'au moins l'une des assertions suivantes est satisfaite : la puissance de batterie croît au-delà du seuil de puissance de batterie, la puissance de batterie croît au-delà d'un second seuil de puissance de batterie et/ou le dispositif de communication (13602) est connecté sur une alimentation en puissance de charge.

**2.** Support lisible par ordinateur non transitoire selon la revendication 1, dans lequel le scénario est un scénario à puissance contrainte.

**3.** Support lisible par ordinateur non transitoire selon la revendication 1 ou 2, dans lequel la régulation des données en provenance des une ou plusieurs applications (15908, 15910) comprend la régulation des données d'une première priorité à un premier niveau et la régulation des données d'une seconde priorité à un second niveau.

**4.** Support lisible par ordinateur non transitoire selon l'une quelconque des revendications 1 à 3, dans lequel la classification des données selon une pluralité de priorités comprend la classification d'un service de messagerie en tant que trafic de priorité ; la classification des données en fonction de classements entrés par utilisateur ou la classification des données sur la base de l'utilisation d'utilisateur.

**5.** Support lisible par ordinateur non transitoire selon l'une quelconque des revendications 1 à 4, dans lequel la classification des données selon la pluralité de priorités comprend la classification des données sur la base de si les données sont des données de trafic en temps réel ou des données de trafic non en temps réel.

**6.** Support lisible par ordinateur non transitoire selon la revendication 5, dans lequel la régulation des données comprend la transmission des données classifiées en tant que trafic non critique selon le retard de transmission plus long que les données qui ne sont pas un trafic de priorité d'utilisateur ou que les données qui sont un trafic non en temps réel.

**7.** Support lisible par ordinateur non transitoire selon l'une quelconque des revendications 1 à 6, dans lequel la classification des données en provenance d'une ou de plusieurs applications (15908, 15910) du dispositif de communication (13602) selon une pluralité de priorités comprend la classification des données au niveau d'un processeur d'application du dispositif de communication (13602), dans lequel le processeur d'application est configuré pour exécuter les une ou plusieurs applications (15908, 15910).

**8.** Support lisible par ordinateur non transitoire selon l'une quelconque des revendications 1 à 7, dans lequel la régulation des données en provenance des une ou plusieurs applications (15908, 15910) à des niveaux variables sur la base de leurs priorités respectives tandis que le dispositif de communication (13602) est dans le scénario comprend la régulation du trafic de priorité la plus faible au niveau d'un pilote de modem, la régulation du trafic de priorité la plus faible au niveau d'un modem de bande de base.

**9.** Support lisible par ordinateur non transitoire selon l'une quelconque des revendications 1 à 8, dans lequel la régulation des données comprend la régulation de procédures de synchronisation de données d'application en interrompant l'envoi de requêtes de synchronisation périodique.

**10.** Dispositif de communication (13602) comprenant :

un circuit de détection (15906) configuré pour déterminer que le dispositif de communication (13602) est dans un scénario lorsqu'une puissance de batterie du dispositif de communication (13602) chute en-deçà d'un seuil de puissance de batterie ;
un circuit de classification (15904) configuré pour classifier les données en provenance d'une ou de plusieurs applications (15908, 15910) du dispositif de communication (13602) selon une pluralité de priorités, dans lequel le circuit de classification (15904) est configuré pour classifier les données depuis une priorité la plus élevée jusqu'à une priorité la plus faible sur la base de l'utilisation des une ou plusieurs applications (15908, 15910) pendant une période temporelle étendue ; et
un circuit de commande de trafic (15902) configuré pour réguler les données en provenance des une ou plusieurs applications (15908, 15910) sur la base de leurs priorités respectives tandis que le dispositif de communication (13602) est dans le scénario, dans lequel le circuit de commande de trafic (15902) est configuré pour transmettre les données de priorité la plus faible selon un retard de transmission plus long que les données de priorité la plus élevée, dans lequel le circuit de commande de trafic (15902) est en outre configuré pour arrêter la régulation lorsque le dispositif de communication (13602) sort du scénario, dans lequel le dispositif de communication (13602) est déterminé comme étant sorti du scénario lorsqu'au moins l'une des assertions suivantes est satisfaite : la puissance de batterie croît au-delà du seuil de puissance de batterie, la puissance de batterie croît au-delà d'un second seuil de puissance de batterie et/ou le dispositif de communication (13602) est connecté sur une alimentation en puissance de charge.

**11.** Procédé de réduction de la consommation de puissance comprenant :

la détermination du fait que le dispositif de communication (13602) est dans un scénario lorsqu'une puissance de batterie du dispositif de communication (13602) chute en-deçà d'un seuil de puissance de batterie ;
la classification des données en provenance d'une ou de plusieurs applications (15908, 15910) du dispositif de communication (13602) selon une pluralité de priorités, dans lequel la classification des données selon la pluralité de priorités comprend la classification des données depuis une priorité la plus élevée jusqu'à une priorité la plus faible sur la base de l'utilisation des une ou plusieurs applications (15908, 15910) pendant une période temporelle étendue ;
la régulation des données en provenance des une ou plusieurs applications (15908, 15910) sur la base de leurs priorités respectives tandis que le dispositif de communication (13602) est dans le scénario, dans lequel la régulation des données comprend la transmission des données de priorité la plus faible selon un retard de transmission plus long que les données de priorité la plus élevée ; et
l'arrêt de la régulation lorsque le dispositif de communication (13602) sort du scénario, dans lequel le dispositif de communication (13602) est déterminé comme étant sorti du scénario lorsqu'au moins l'une des assertions suivantes est satisfaite : la puissance de batterie croît au-delà du seuil de puissance de batterie, la puissance de batterie croît au-delà d'un second seuil de puissance de batterie et/ou le dispositif de communication (13602) est connecté sur une alimentation en puissance de charge.

FIG 1

100

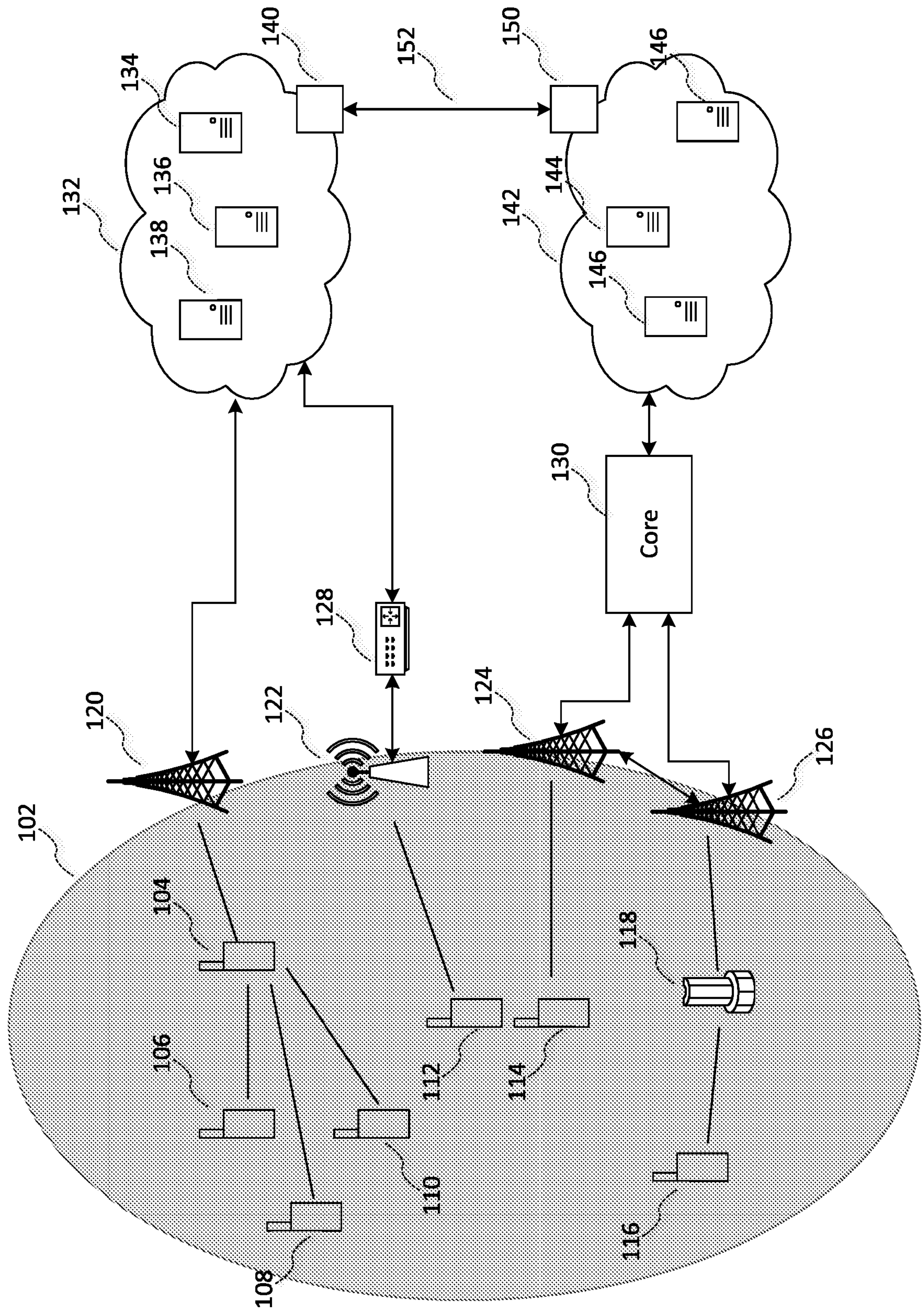

102
104
106
108
110
112
114
116
118
120
122
124
126
128
130
Core
132
134
136
138
140
142
144
146
146
146
150
152

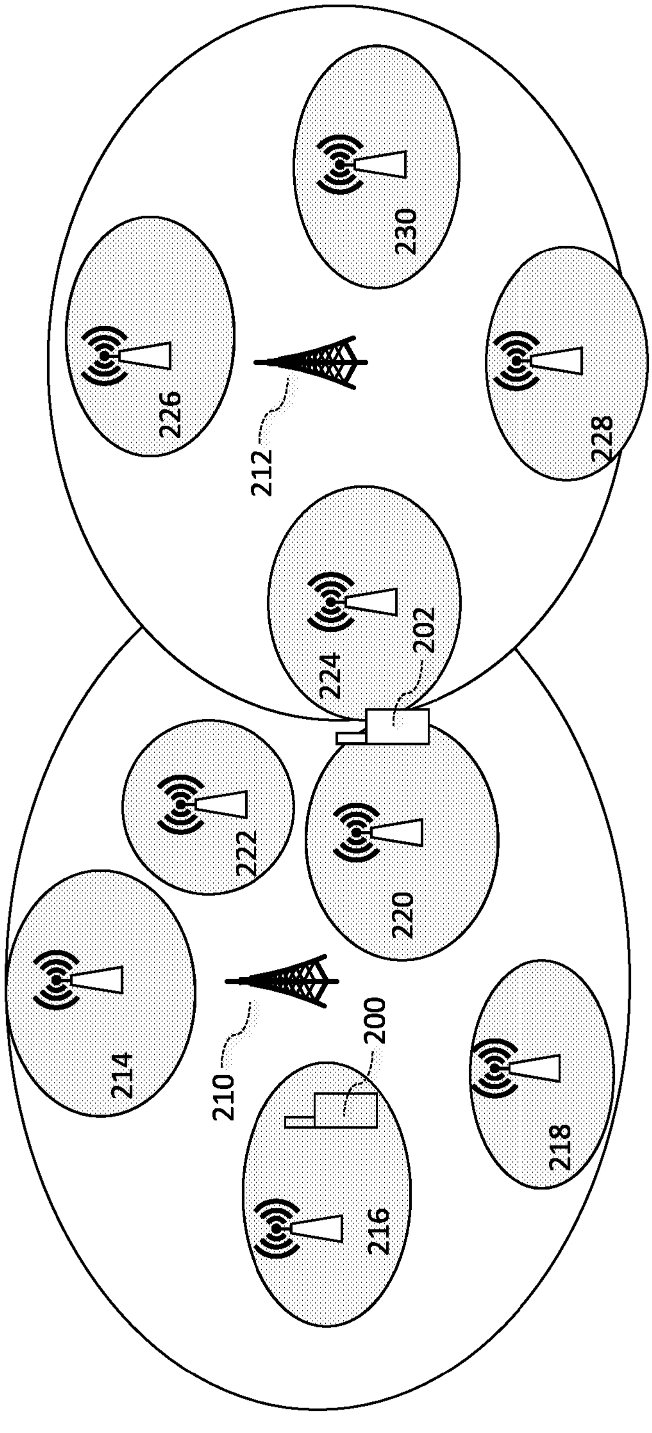


FIG 2

FIG 3

200

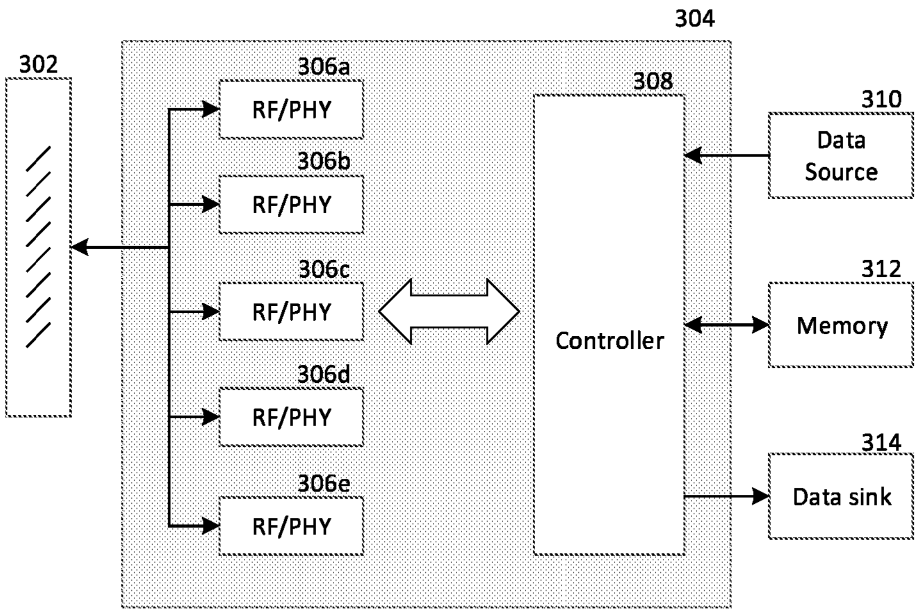
304
302
306a
RF/PHY
306b
RF/PHY
306c
RF/PHY
306d
RF/PHY
306e
RF/PHY
308
Controller
310
Data Source
312
Memory
314
Data sink

FIG 4

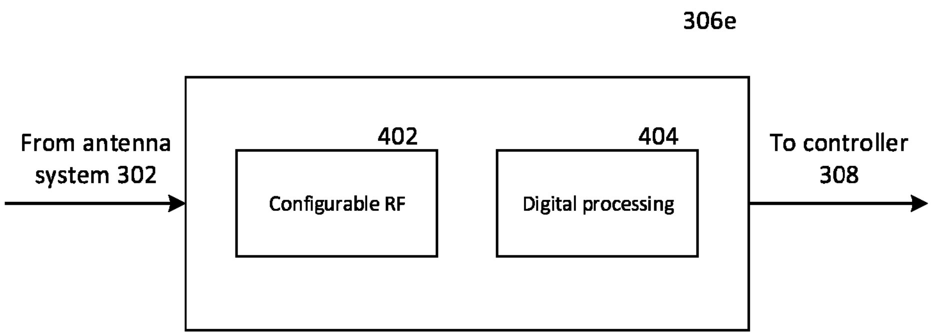
306e
402
404
From antenna system 302
Configurable RF
Digital processing
To controller 308

FIG 5

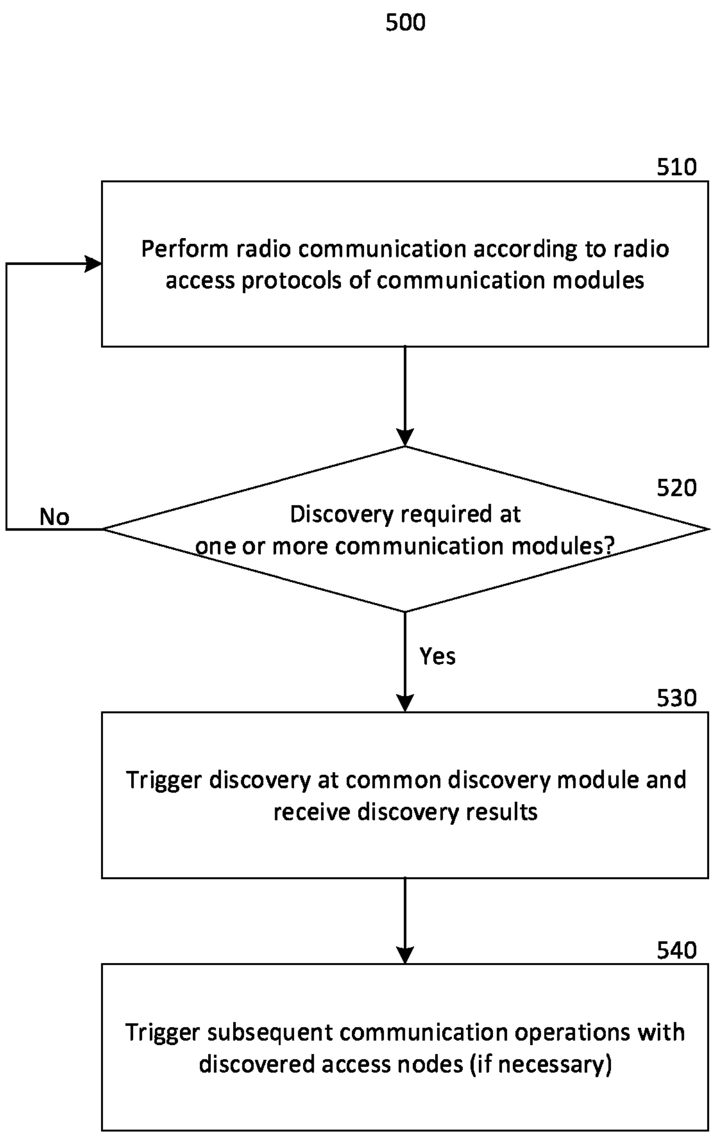
500
510
Perform radio communication according to radio access protocols of communication modules
520
Discovery required at one or more communication modules?
No
Yes
530
Trigger discovery at common discovery module and receive discovery results
540
Trigger subsequent communication operations with discovered access nodes (if necessary)

FIG 6

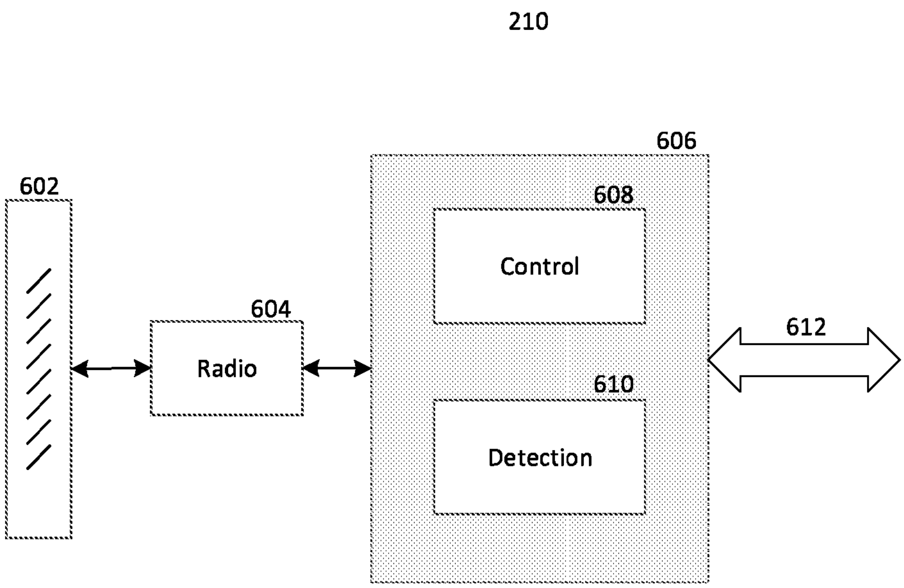

FIG 7

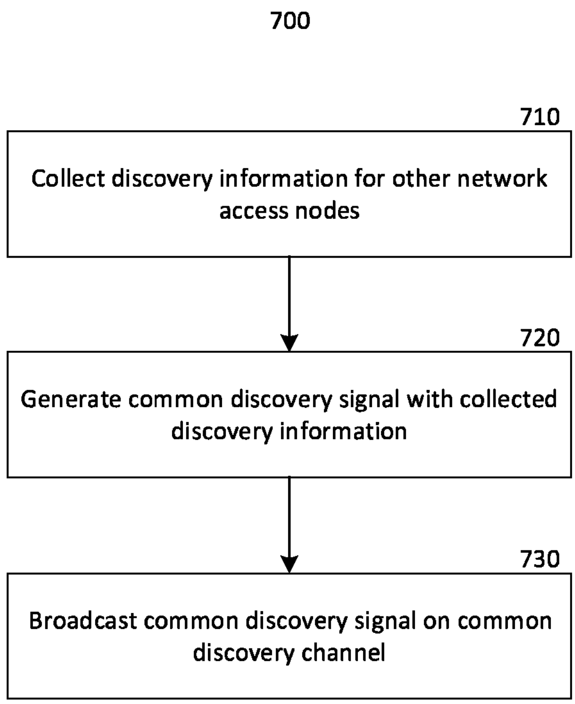
700
710
Collect discovery information for other network access nodes
720
Generate common discovery signal with collected discovery information
730
Broadcast common discovery signal on common discovery channel

FIG 8

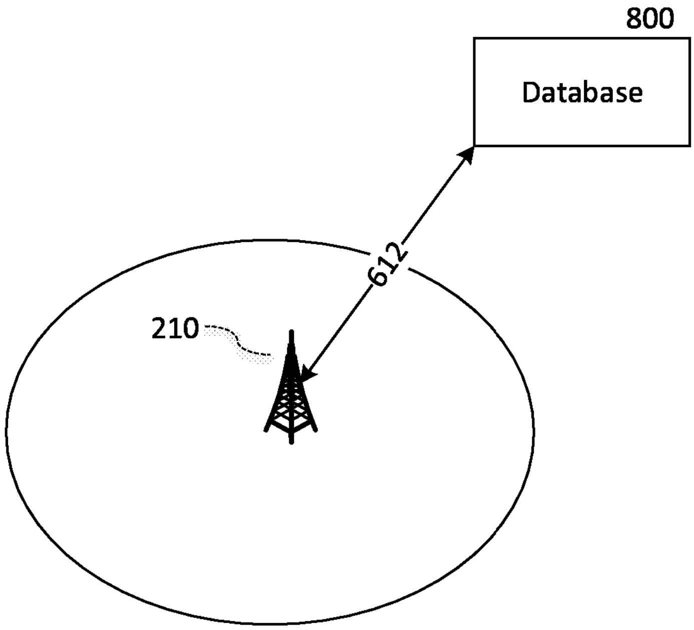

FIG 9

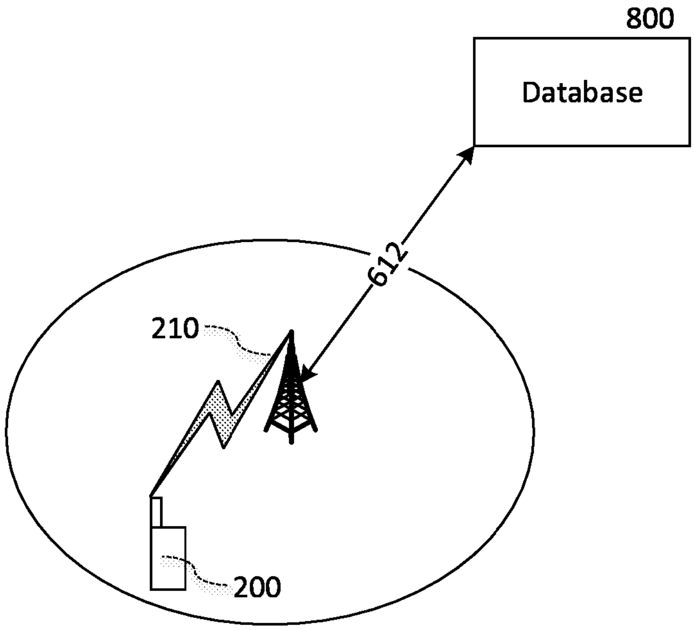

FIG 10

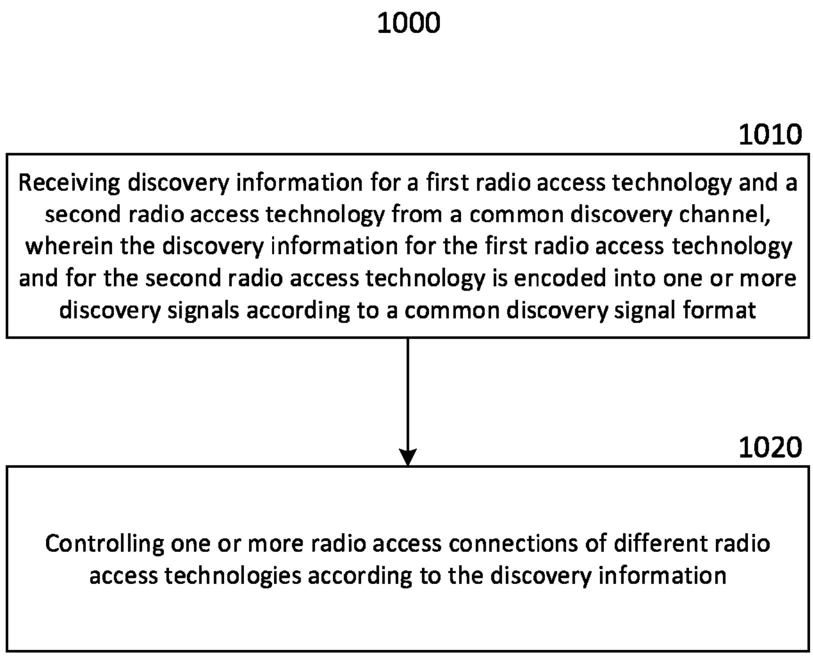
1000
1010
Receiving discovery information for a first radio access technology and a second radio access technology from a common discovery channel, wherein the discovery information for the first radio access technology and for the second radio access technology is encoded into one or more discovery signals according to a common discovery signal format
1020
Controlling one or more radio access connections of different radio access technologies according to the discovery information

FIG 11

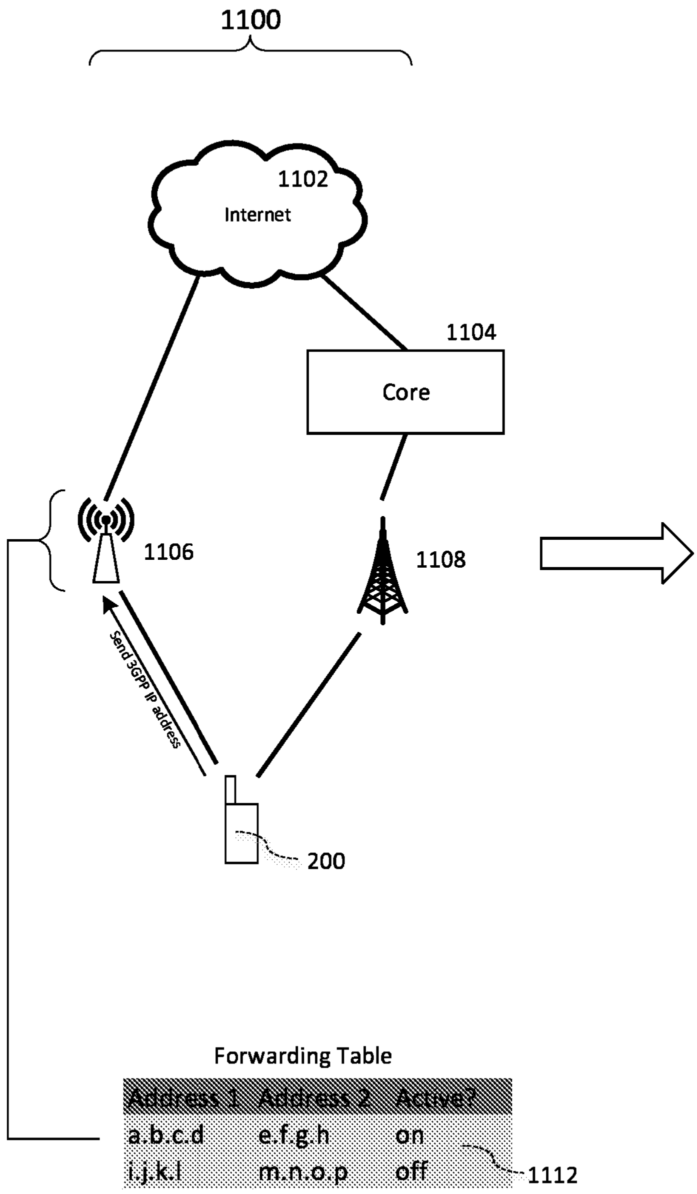
1100
1110
1102
Internet
1104
Core
1106
1108
Send 3GPP IP address
200
Request for a.b.c.d
Forwarded to e.f.g.h
Forwarding Table
Address 1 Address 2 Active?
a.b.c.d e.f.g.h on
i.j.k.l m.n.o.p off
1112

FIG 12

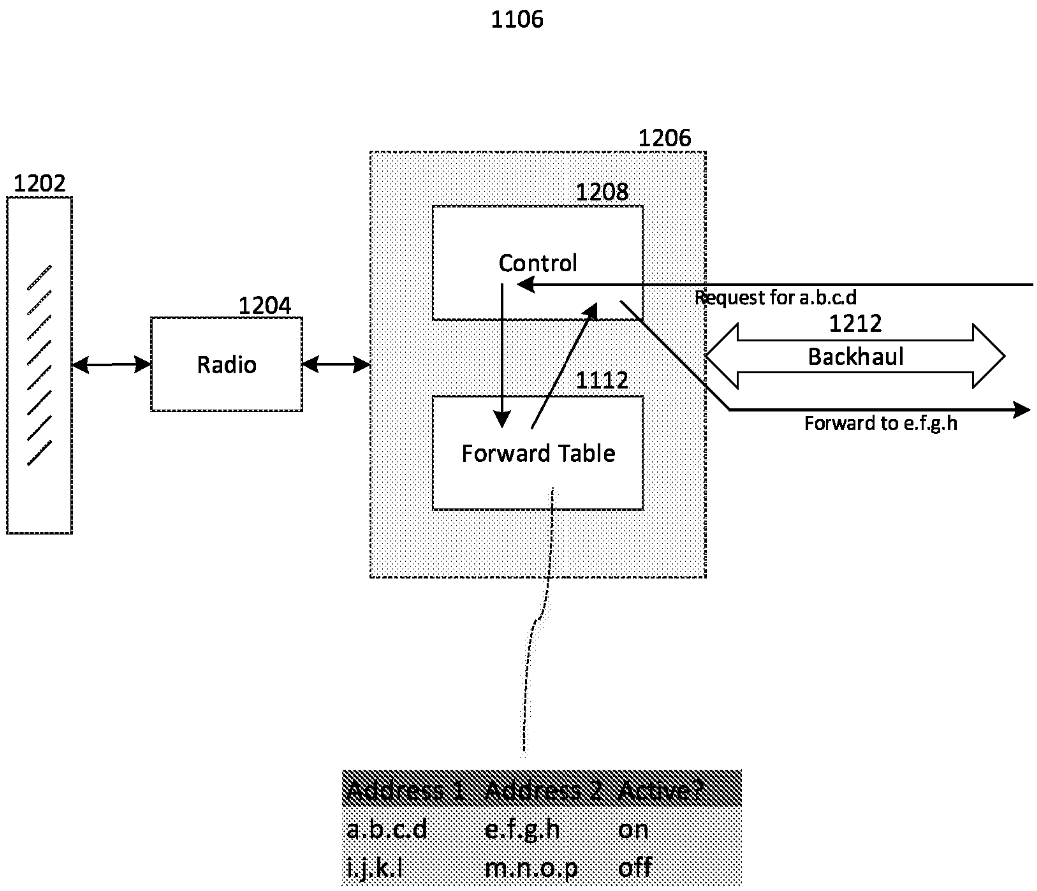
1106
1206
1208
Control
1202
1204
Radio
Request for a.b.c.d
1212
Backhaul
1112
Forward Table
Forward to e.f.g.h
Address 1 Address 2 Active?
a.b.c.d e.f.g.h on
i.j.k.l m.n.o.p off

FIG 13

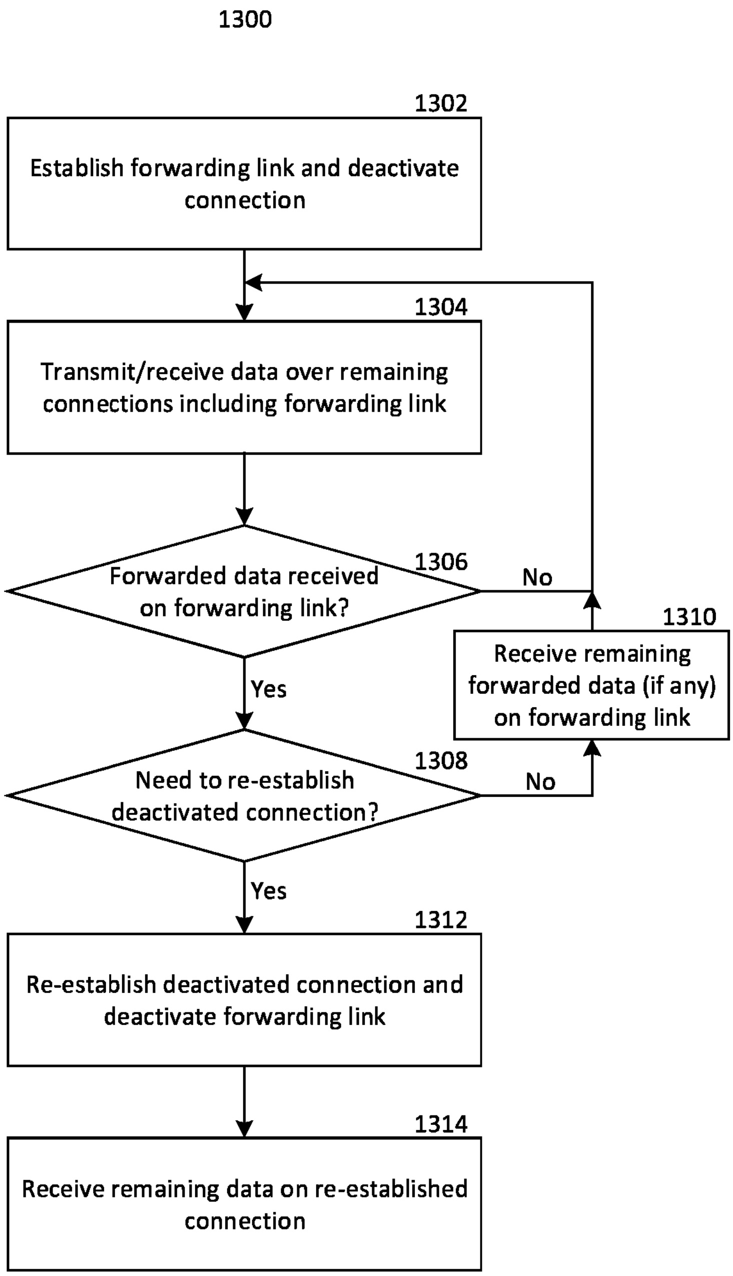
1300
1302
Establish forwarding link and deactivate connection
1304
Transmit/receive data over remaining connections including forwarding link
1306
Forwarded data received on forwarding link?
No
Yes
1310
Receive remaining forwarded data (if any) on forwarding link
1308
Need to re-establish deactivated connection?
No
Yes
1312
Re-establish deactivated connection and deactivate forwarding link
1314
Receive remaining data on re-established connection

FIG 14

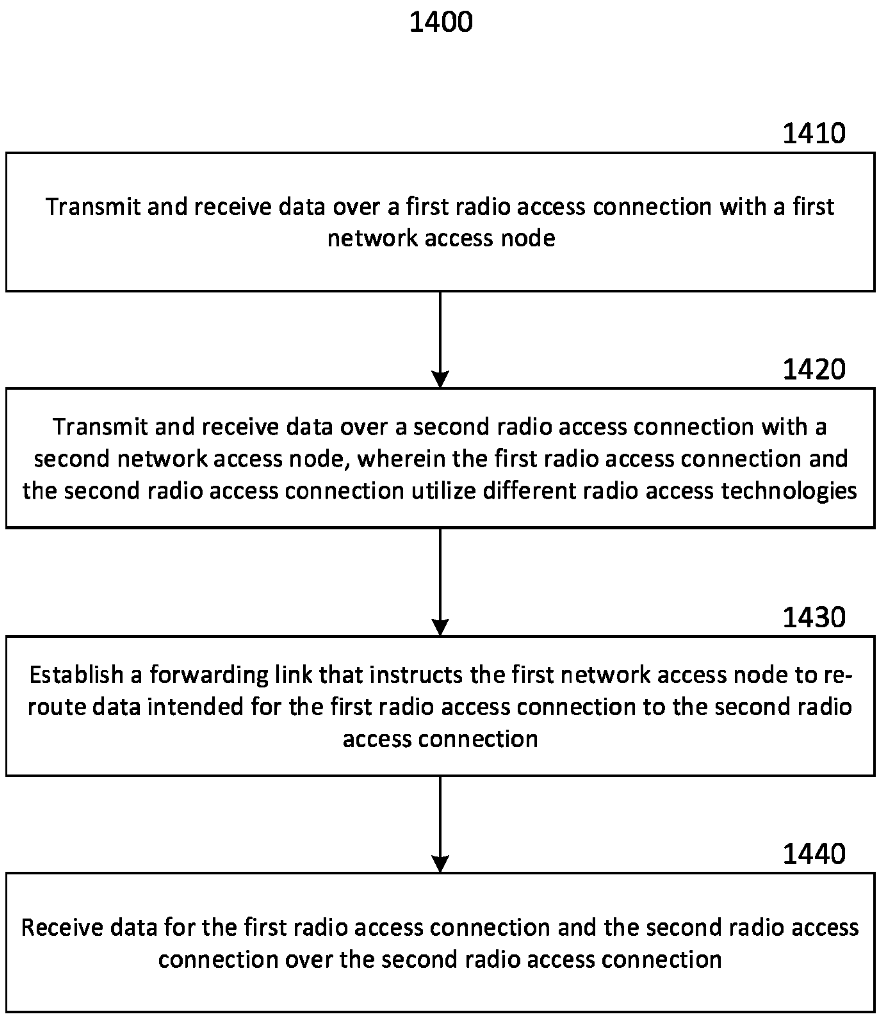
1400
1410
Transmit and receive data over a first radio access connection with a first network access node
1420
Transmit and receive data over a second radio access connection with a second network access node, wherein the first radio access connection and the second radio access connection utilize different radio access technologies
1430
Establish a forwarding link that instructs the first network access node to re-route data intended for the first radio access connection to the second radio access connection
1440
Receive data for the first radio access connection and the second radio access connection over the second radio access connection

FIG 15

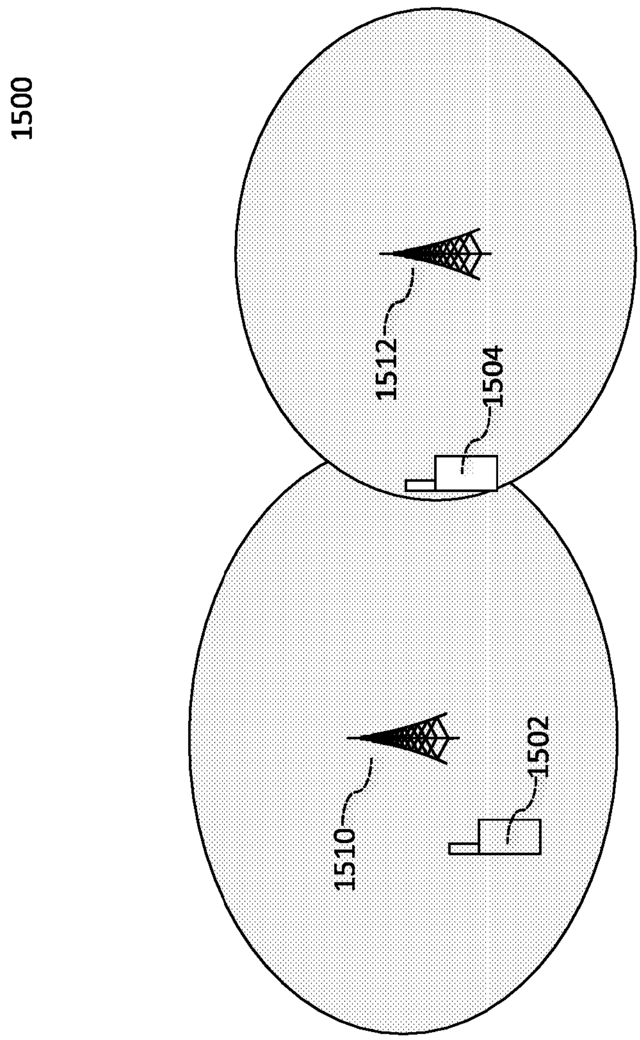

FIG 16

1502

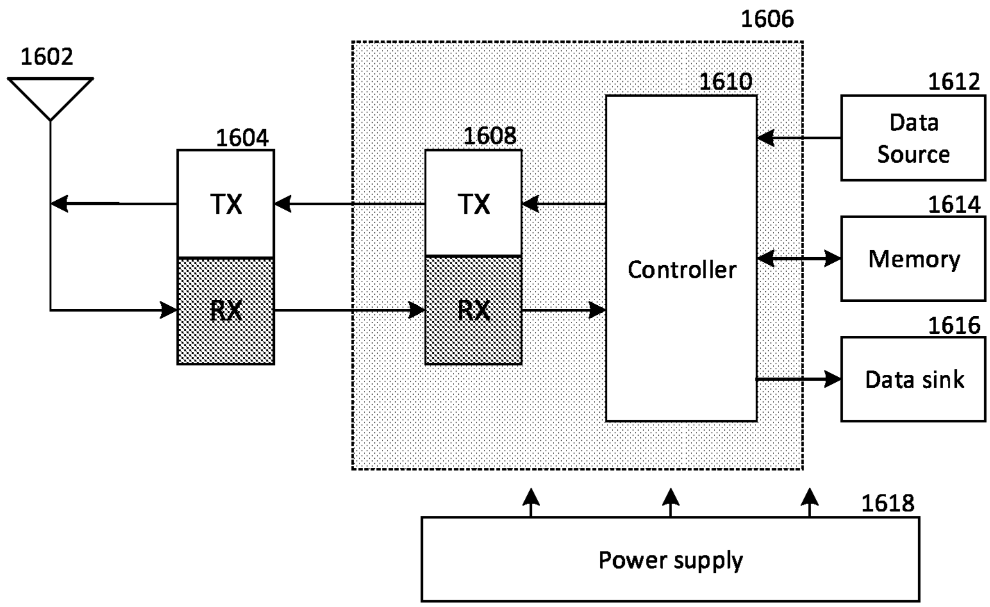
1602
1604
TX
RX
1606
1608
TX
RX
1610
Controller
1612
Data Source
1614
Memory
1616
Data sink
1618
Power supply

FIG 17

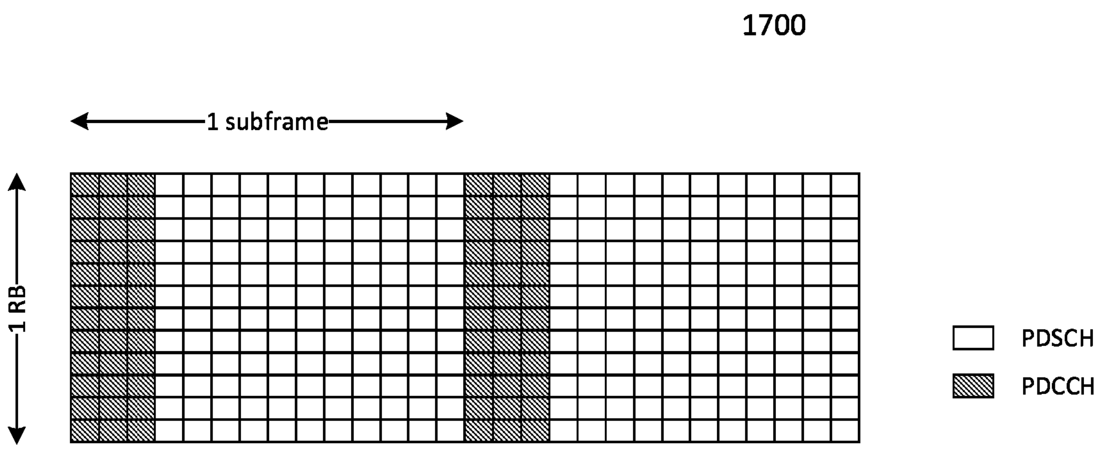

FIG 18

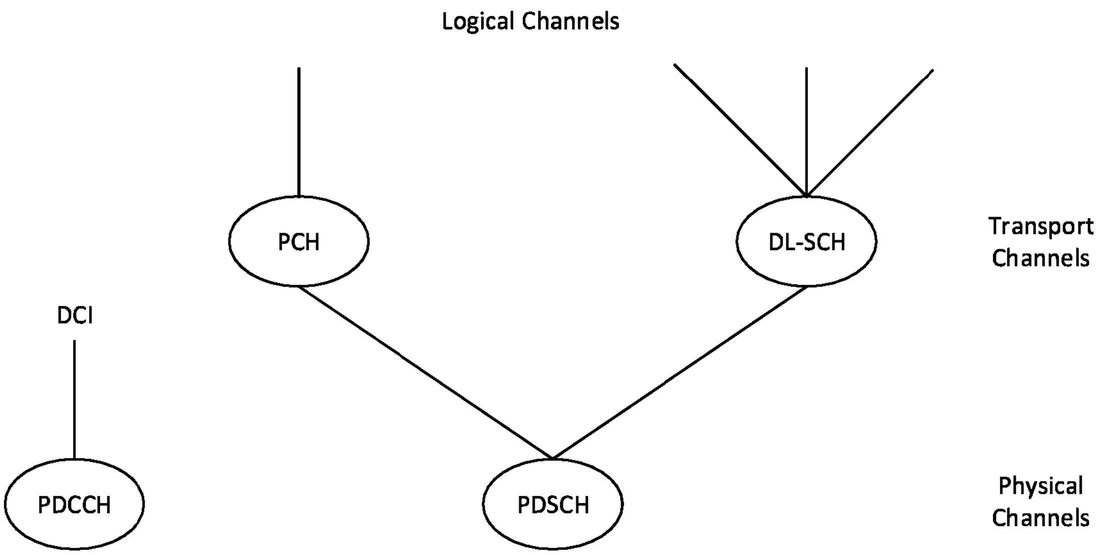
Logical Channels
PCH
DL-SCH
Transport Channels
DCI
PDCCH
PDSCH
Physical Channels

FIG 19

1900

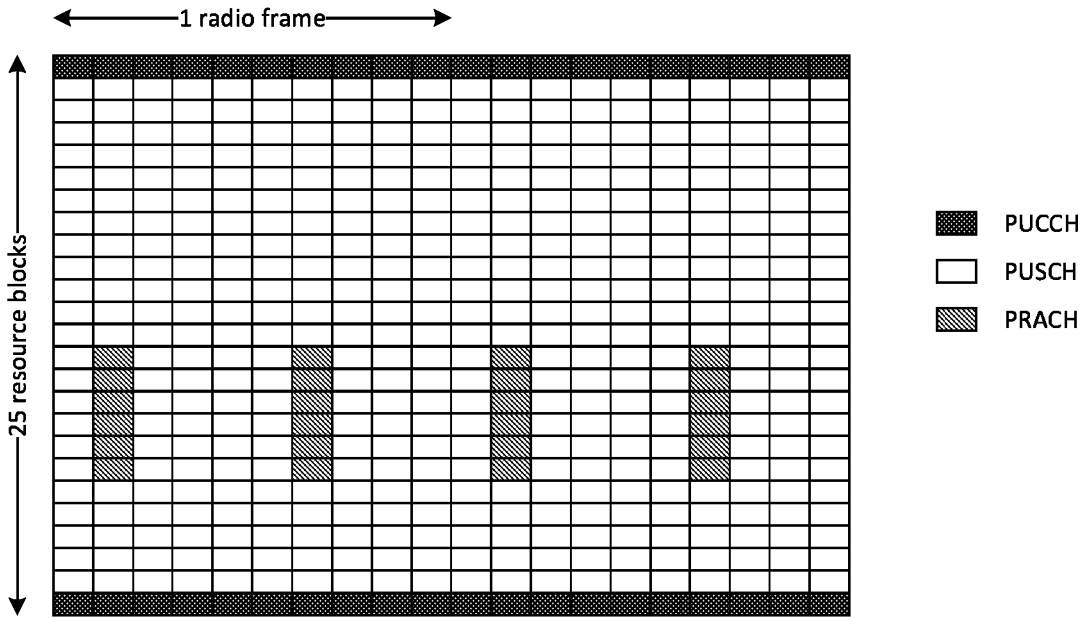

FIG 20

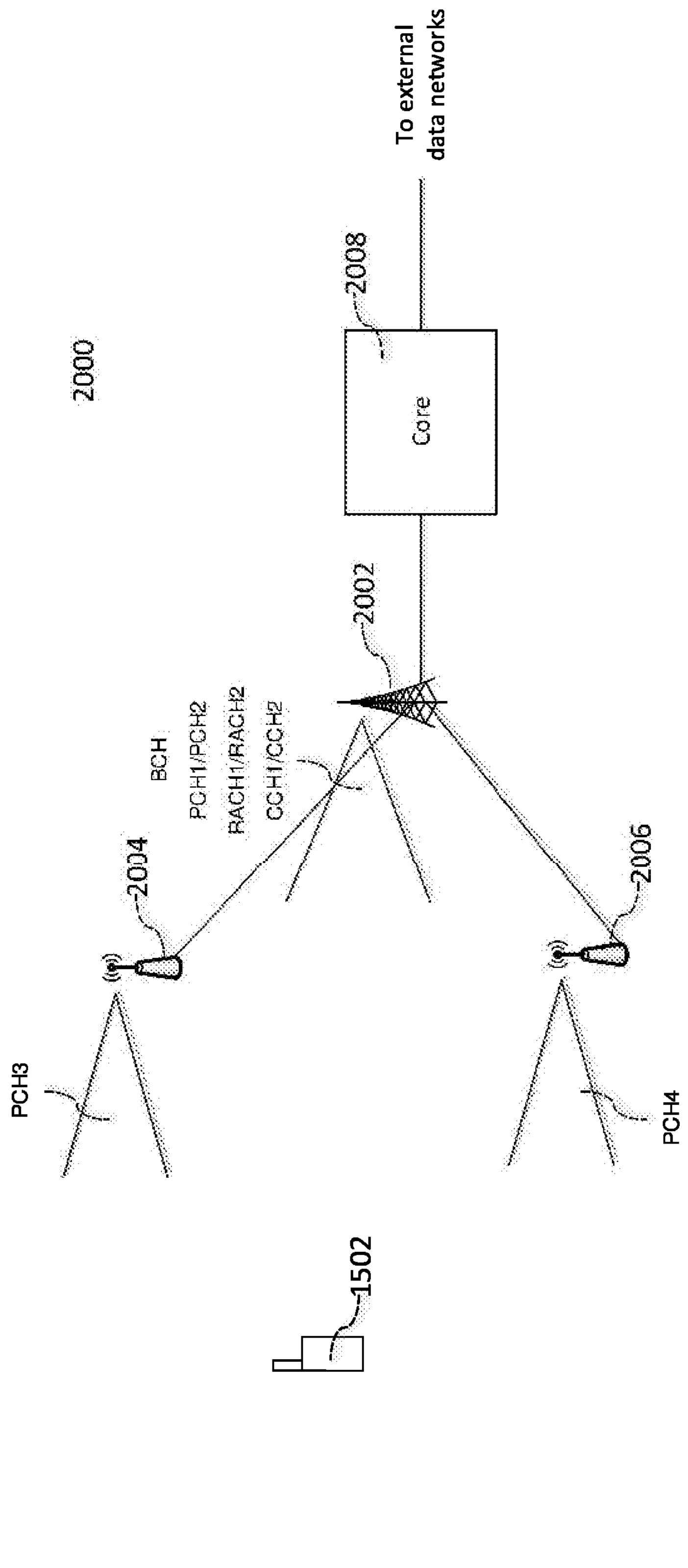
2000
To external
data networks
2008
Core
2002
BCH
PCH1/PCH2
RACH1/RACH2
CCH1/CCH2
2004
2006
PCH3
PCH4
1502

FIG 21

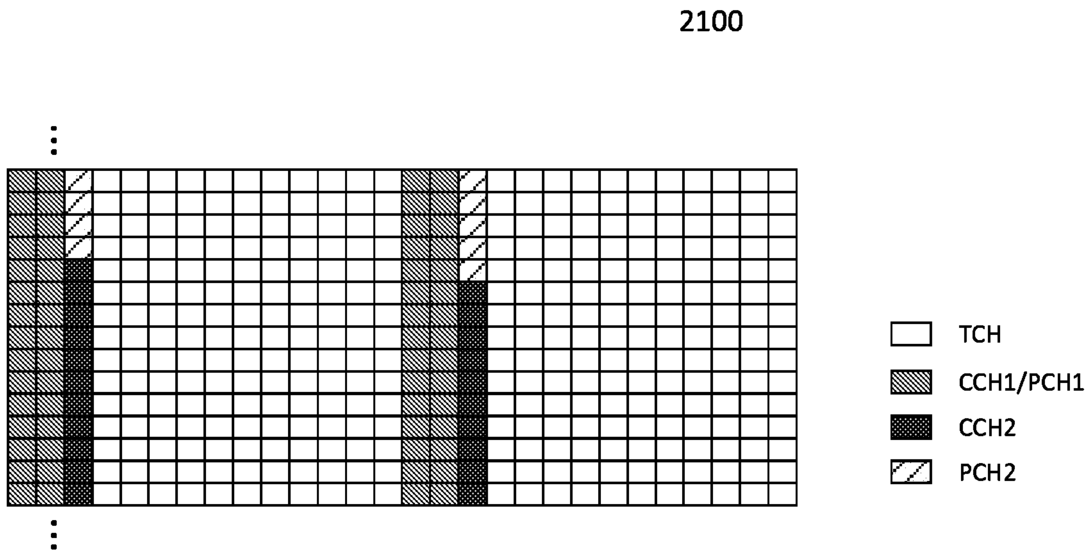

FIG 22

2200

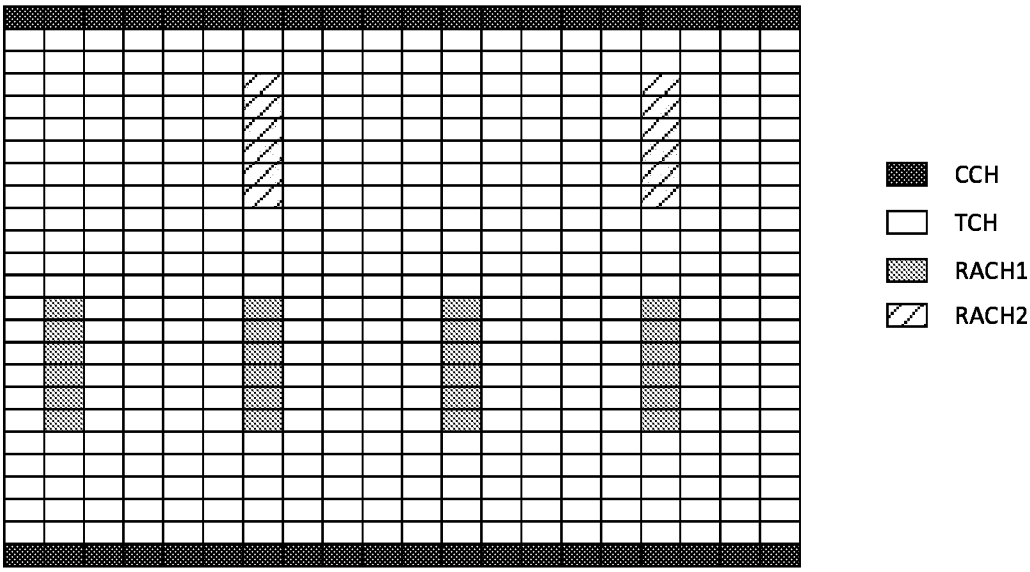

FIG 23

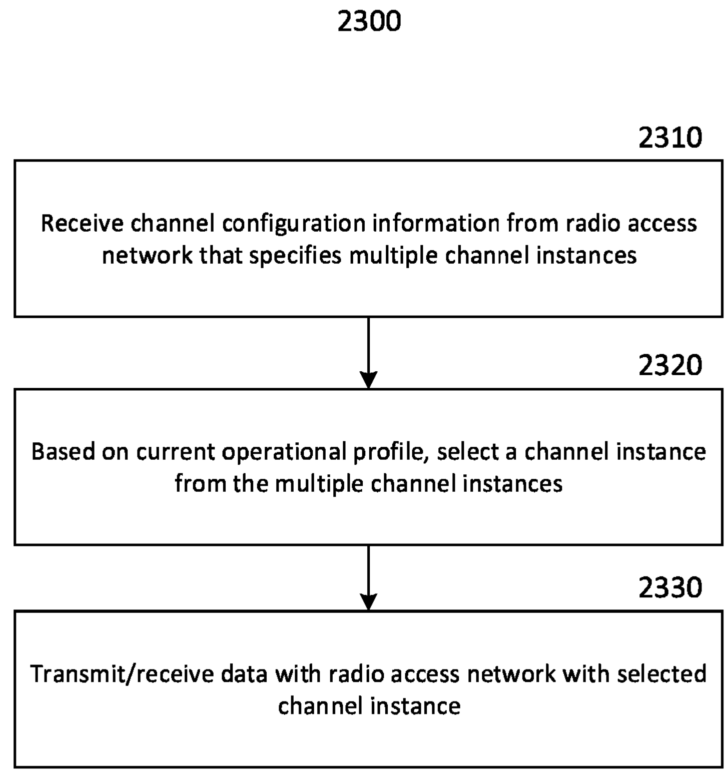
2300
2310
Receive channel configuration information from radio access network that specifies multiple channel instances
2320
Based on current operational profile, select a channel instance from the multiple channel instances
2330
Transmit/receive data with radio access network with selected channel instance

FIG 24

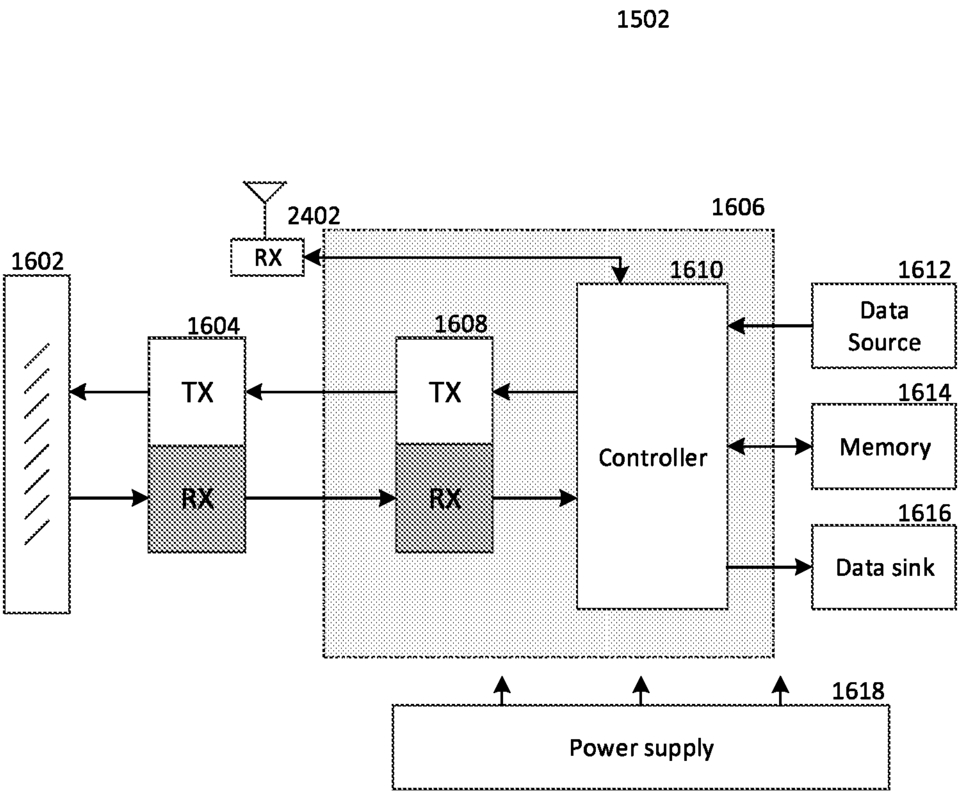
1502
2402
RX
1606
1602
1610
1612
Data Source
1604
1608
TX
TX
1614
Controller
Memory
RX
RX
1616
Data sink
1618
Power supply

FIG 25

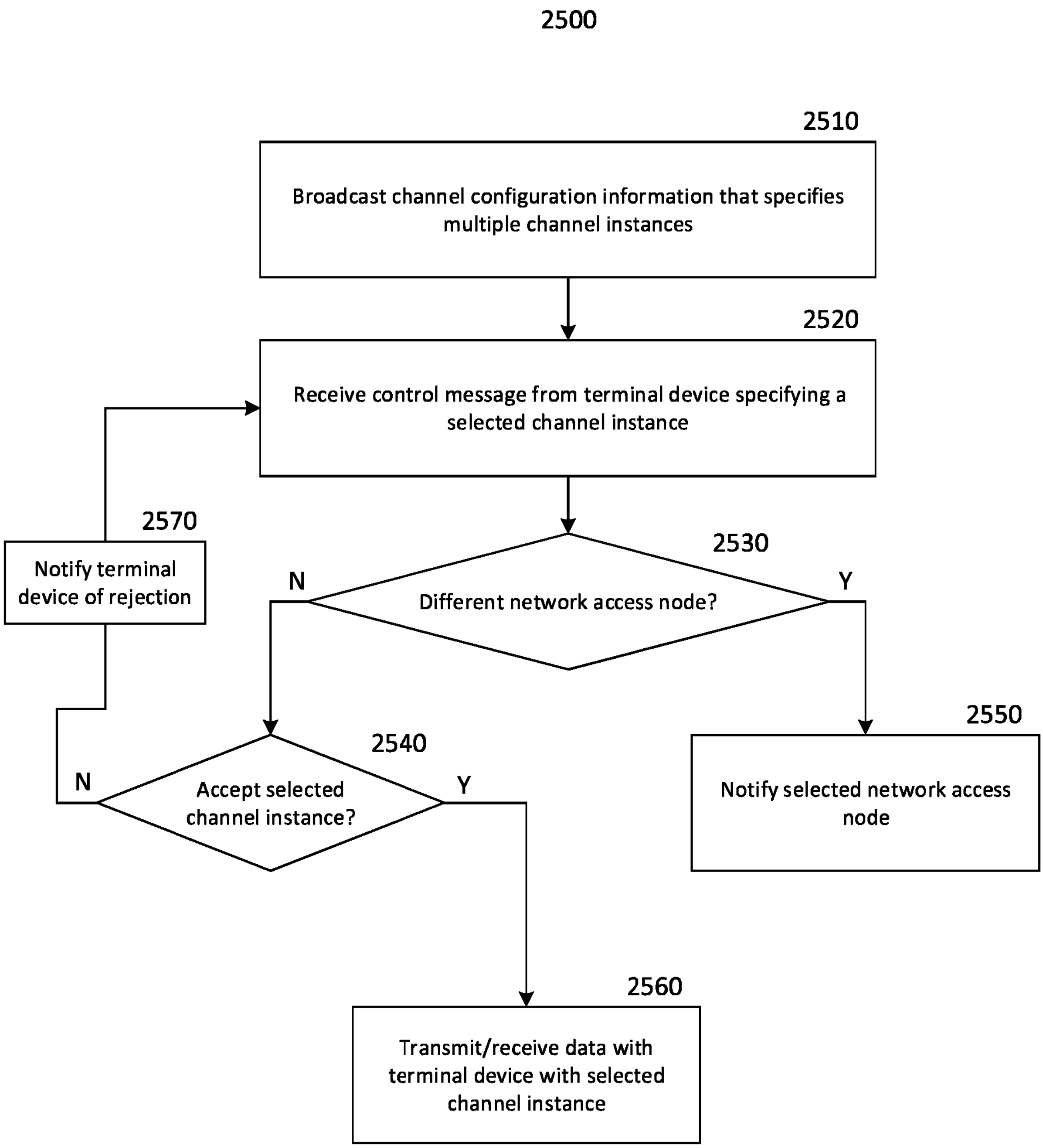
2500
2510
Broadcast channel configuration information that specifies multiple channel instances
2520
Receive control message from terminal device specifying a selected channel instance
2530
Different network access node?
N
Y
2570
Notify terminal device of rejection
2540
Accept selected channel instance?
N
Y
2550
Notify selected network access node
2560
Transmit/receive data with terminal device with selected channel instance

FIG 26

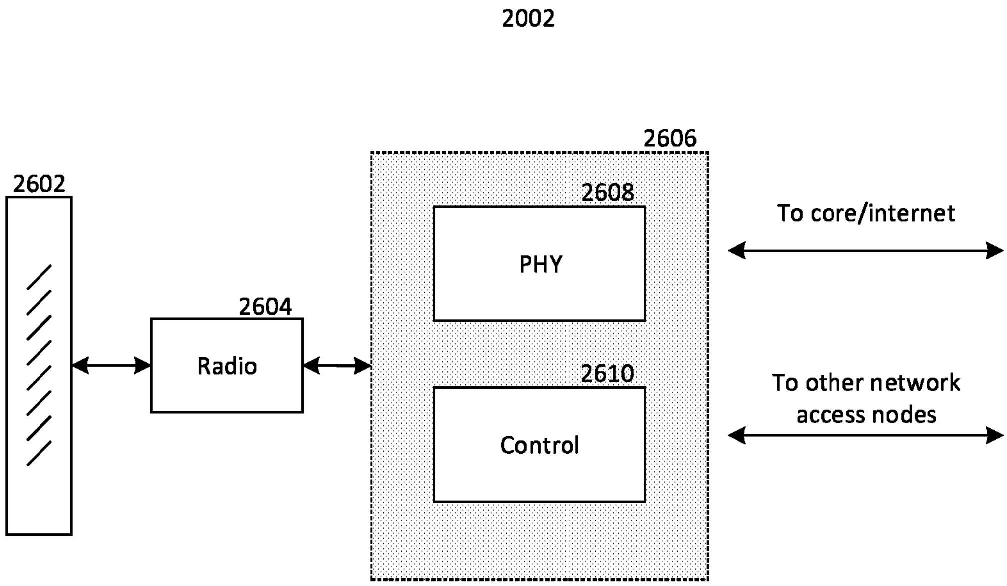
2002
2606
2602
2608
PHY
To core/internet
2604
Radio
2610
Control
To other network
access nodes

FIG 27

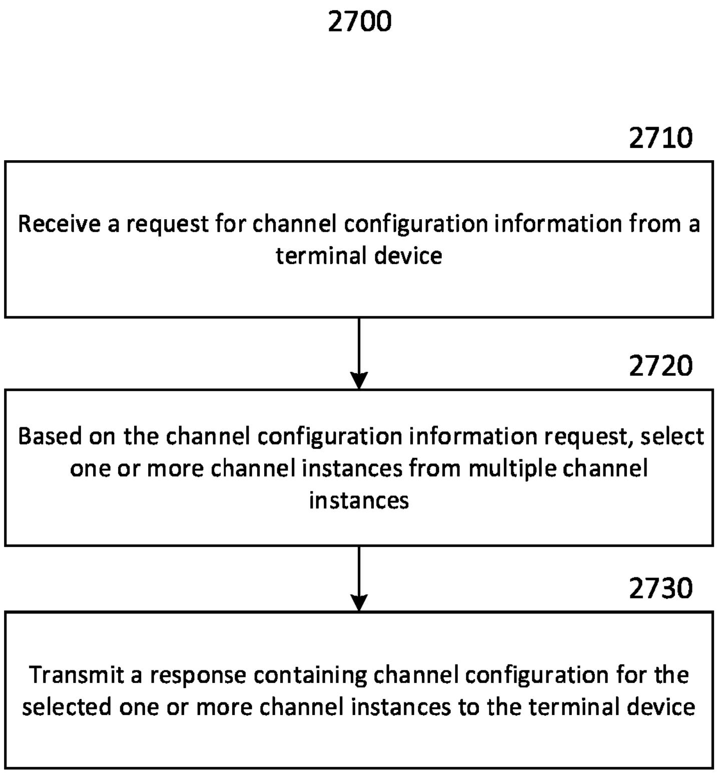
2700
2710
Receive a request for channel configuration information from a terminal device
2720
Based on the channel configuration information request, select one or more channel instances from multiple channel instances
2730
Transmit a response containing channel configuration for the selected one or more channel instances to the terminal device

FIG 28

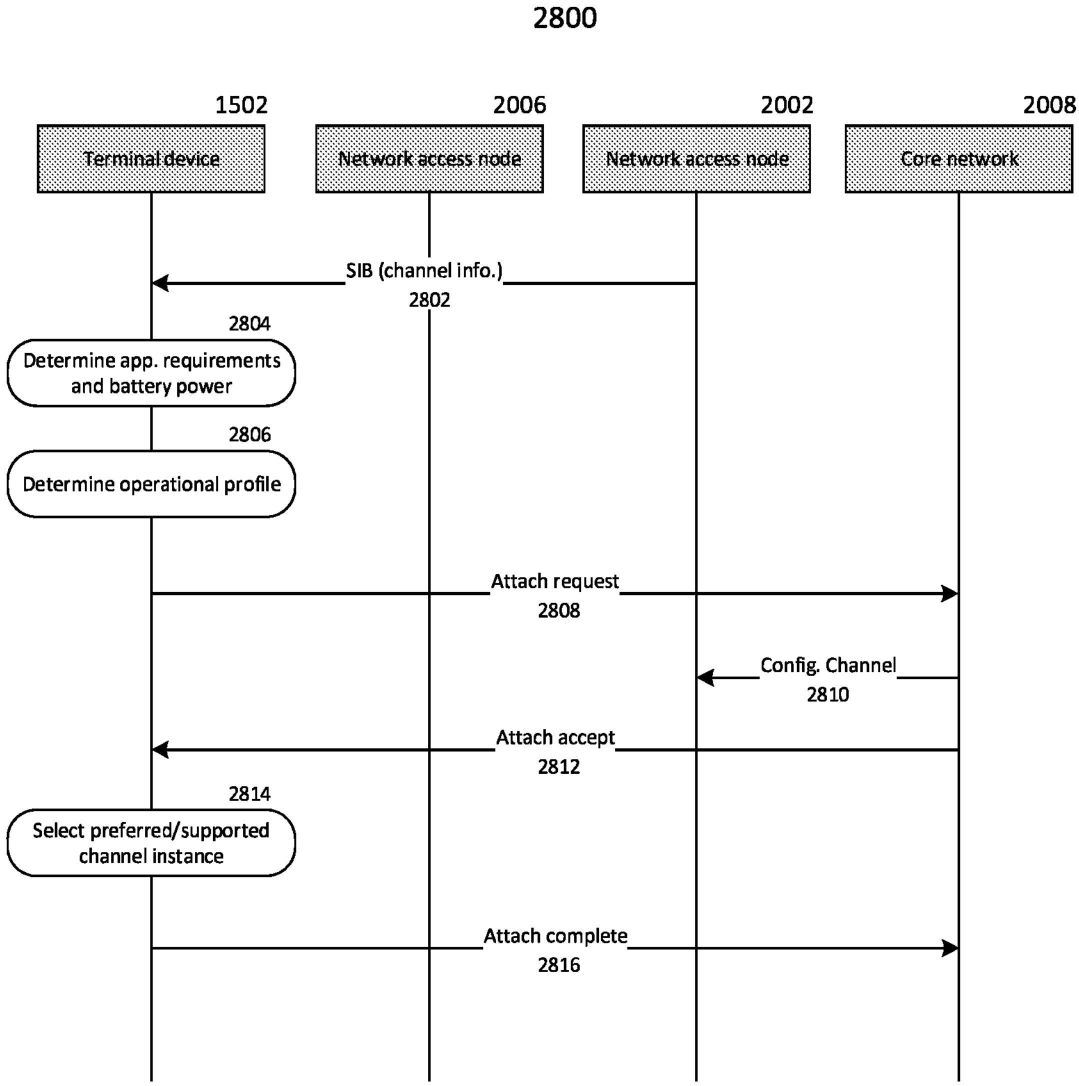
2800
1502
2006
2002
2008
Terminal device
Network access node
Network access node
Core network
SIB (channel info.)
2802
2804
Determine app. requirements and battery power
2806
Determine operational profile
Attach request
2808
Config. Channel
2810
Attach accept
2812
2814
Select preferred/supported channel instance
Attach complete
2816

FIG 29

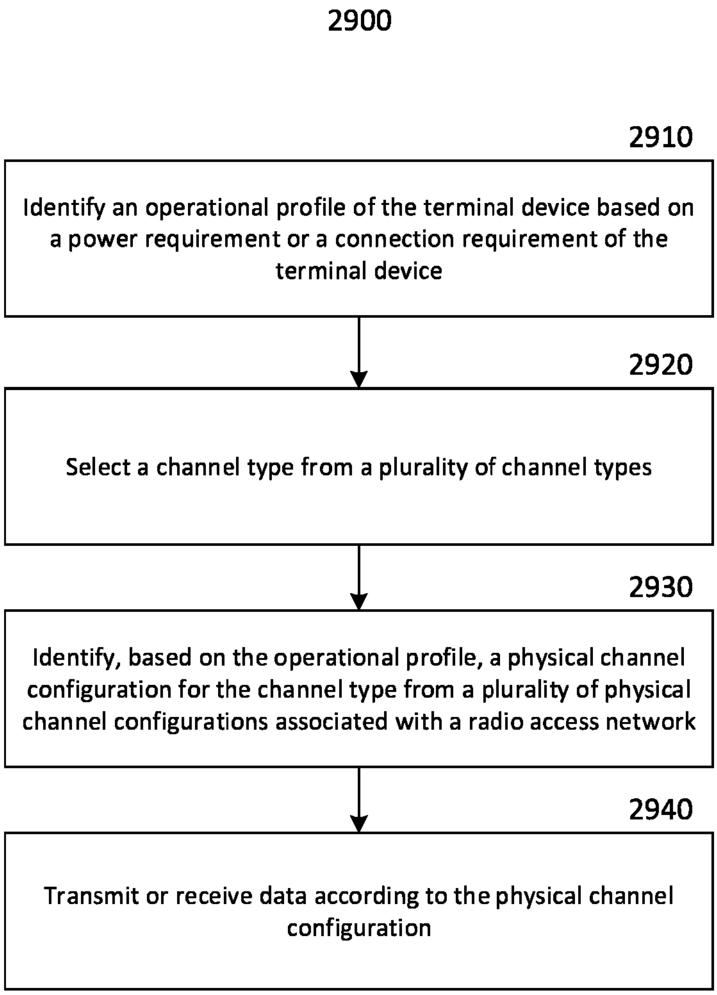
2900
2910
Identify an operational profile of the terminal device based on a power requirement or a connection requirement of the terminal device
2920
Select a channel type from a plurality of channel types
2930
Identify, based on the operational profile, a physical channel configuration for the channel type from a plurality of physical channel configurations associated with a radio access network
2940
Transmit or receive data according to the physical channel configuration

FIG 30

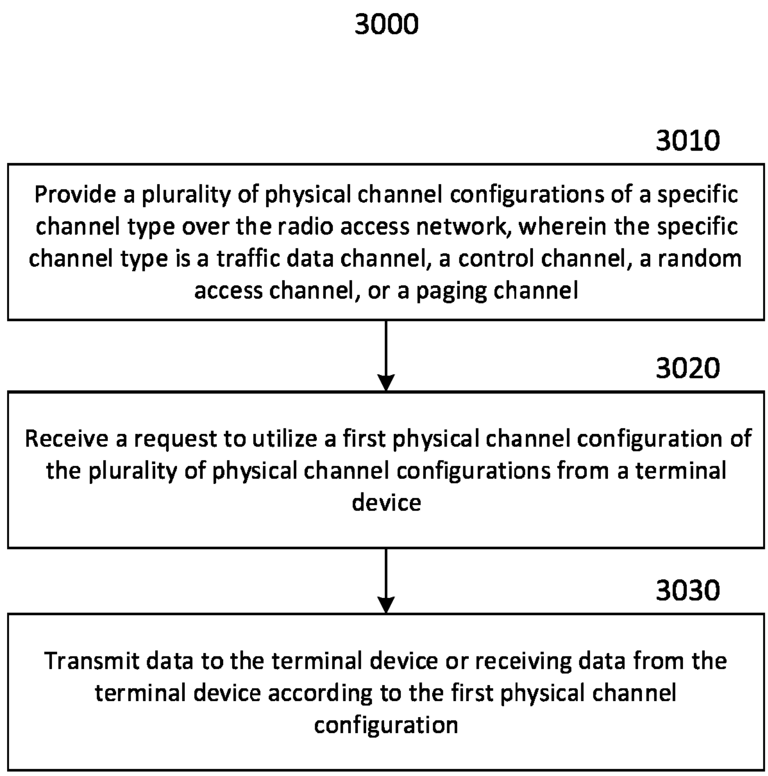
3000
3010
Provide a plurality of physical channel configurations of a specific channel type over the radio access network, wherein the specific channel type is a traffic data channel, a control channel, a random access channel, or a paging channel
3020
Receive a request to utilize a first physical channel configuration of the plurality of physical channel configurations from a terminal device
3030
Transmit data to the terminal device or receiving data from the terminal device according to the first physical channel configuration

FIG 31

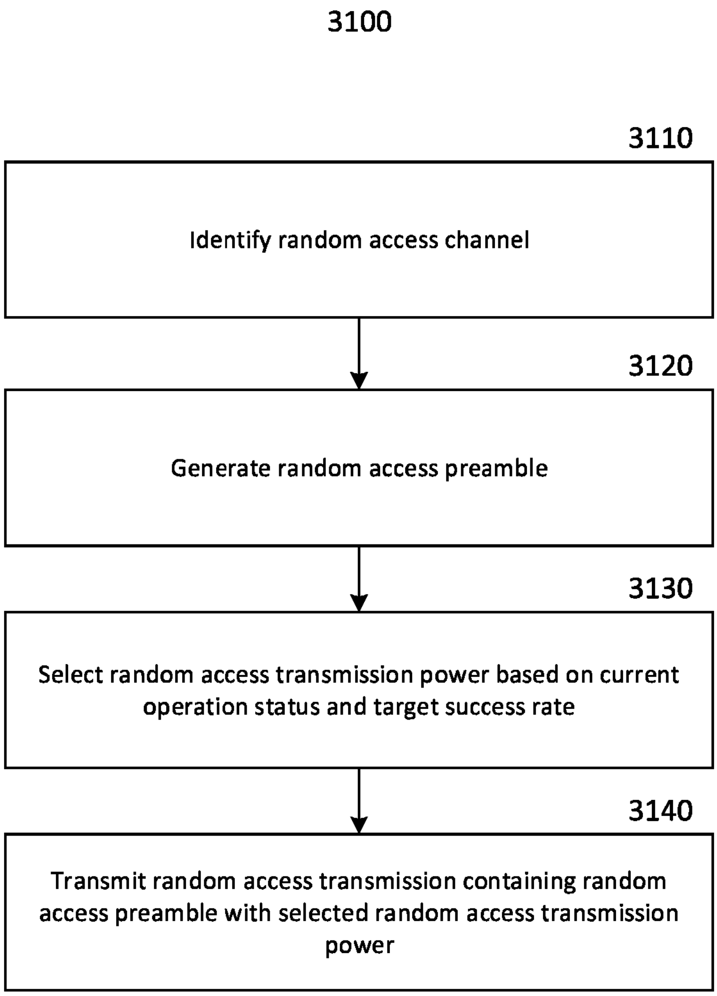
3100
3110
Identify random access channel
3120
Generate random access preamble
3130
Select random access transmission power based on current operation status and target success rate
3140
Transmit random access transmission containing random access preamble with selected random access transmission power

FIG 32

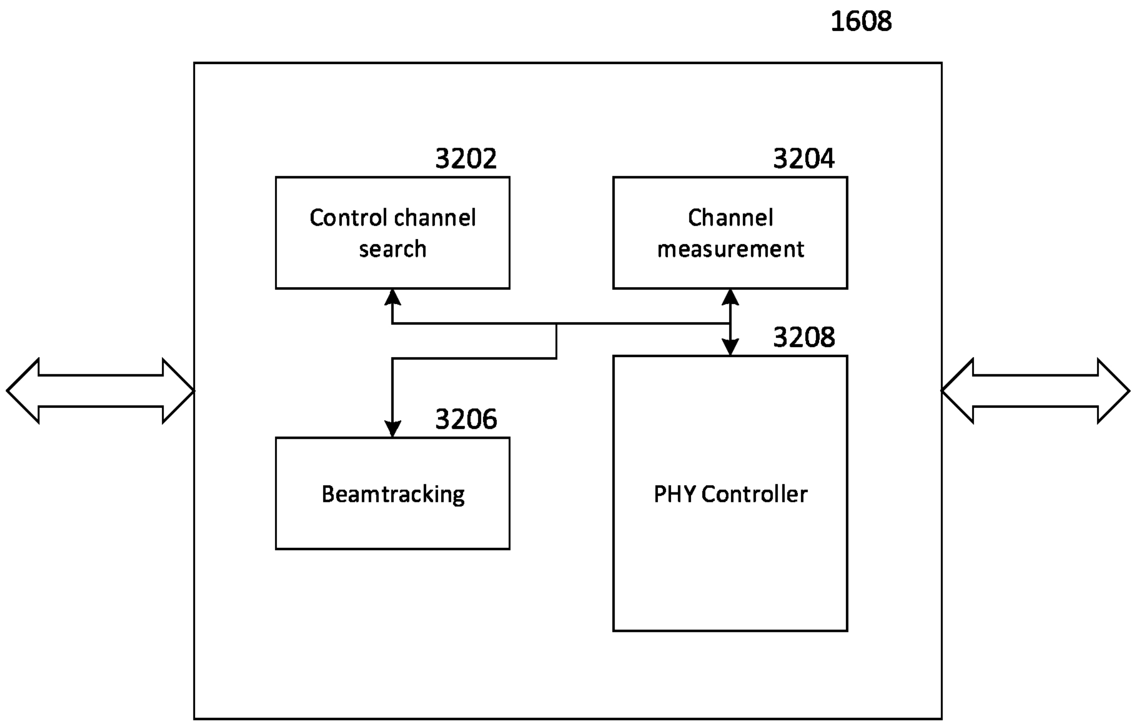
1608
3202
Control channel search
3204
Channel measurement
3208
3206
Beamtracking
PHY Controller

FIG 33

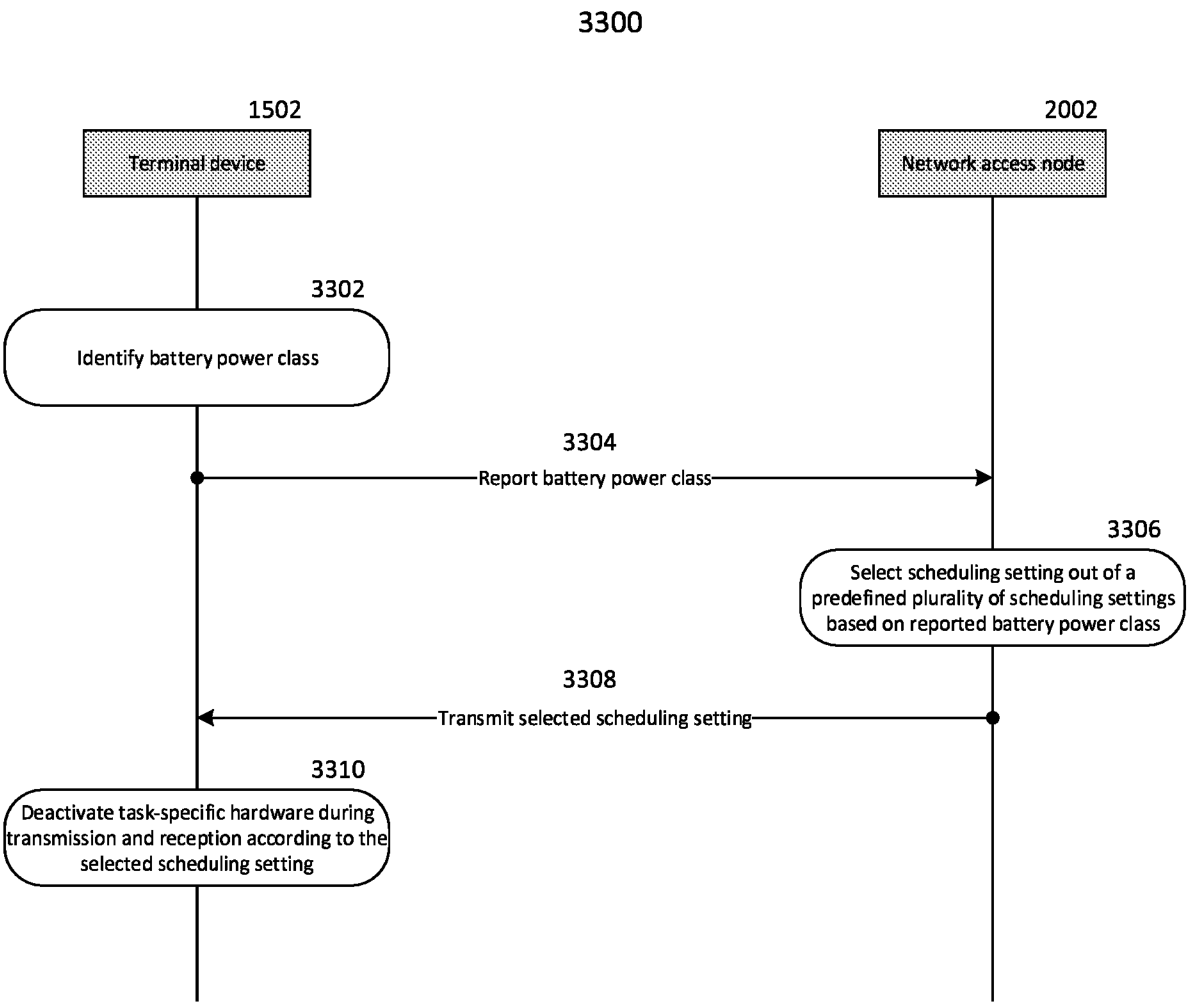
3300
1502
Terminal device
2002
Network access node
3302
Identify battery power class
3304
Report battery power class
3306
Select scheduling setting out of a predefined plurality of scheduling settings based on reported battery power class
3308
Transmit selected scheduling setting
3310
Deactivate task-specific hardware during transmission and reception according to the selected scheduling setting

FIG 34

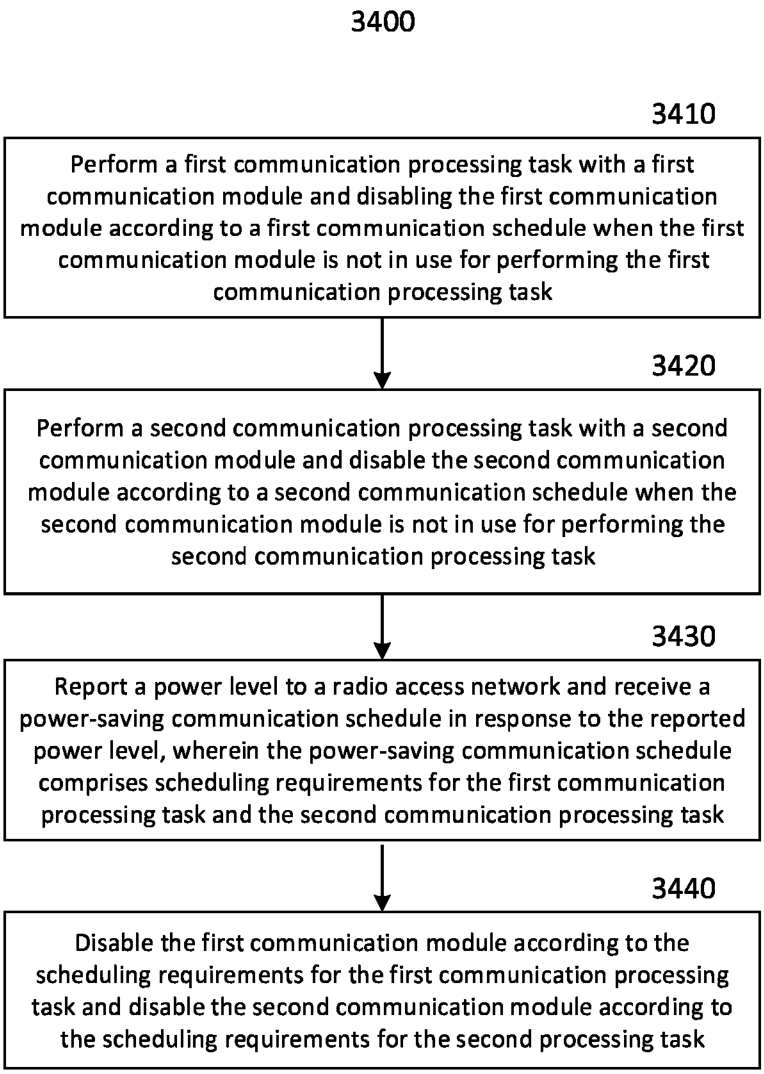
3400
3410
Perform a first communication processing task with a first communication module and disabling the first communication module according to a first communication schedule when the first communication module is not in use for performing the first communication processing task
3420
Perform a second communication processing task with a second communication module and disable the second communication module according to a second communication schedule when the second communication module is not in use for performing the second communication processing task
3430
Report a power level to a radio access network and receive a power-saving communication schedule in response to the reported power level, wherein the power-saving communication schedule comprises scheduling requirements for the first communication processing task and the second communication processing task
3440
Disable the first communication module according to the scheduling requirements for the first communication processing task and disable the second communication module according to the scheduling requirements for the second processing task

FIG 35

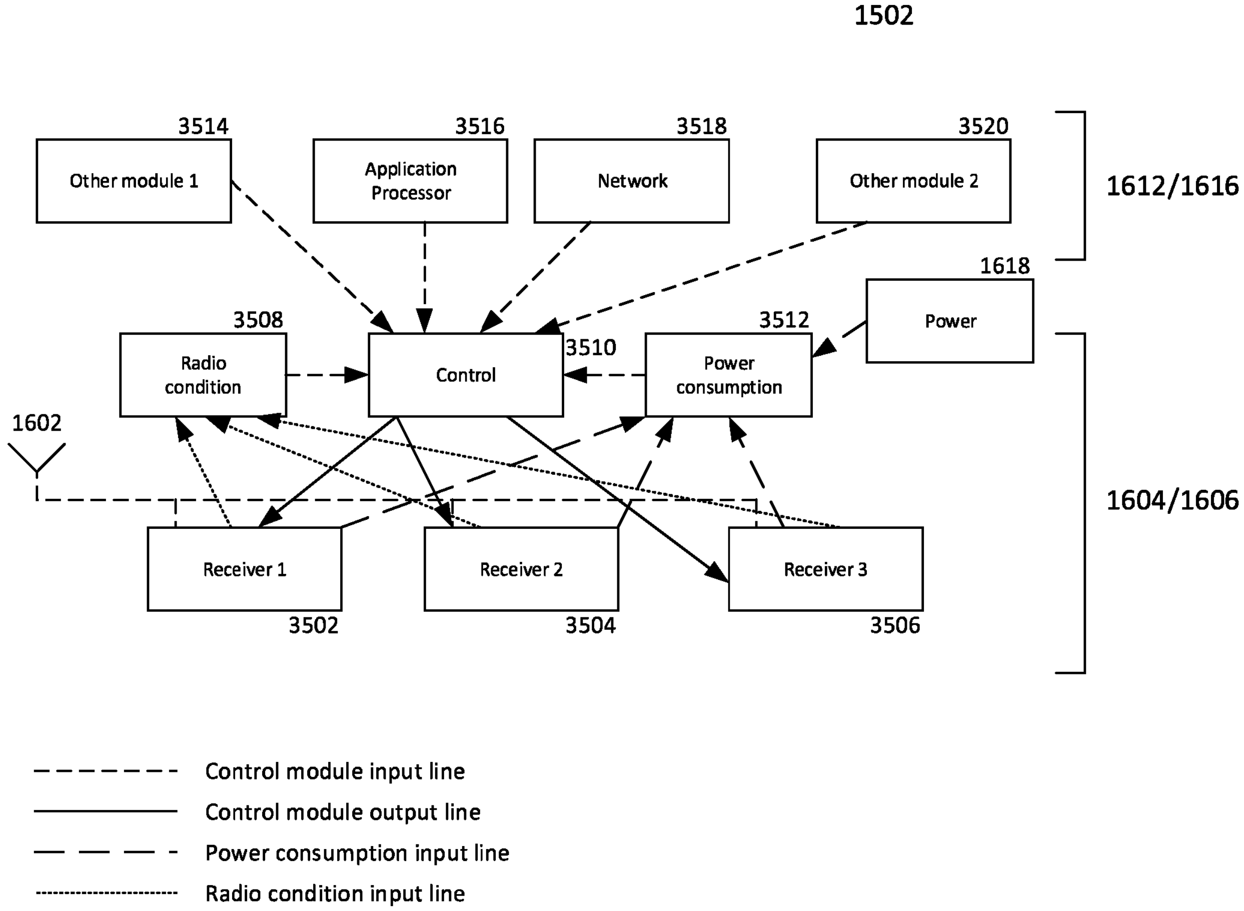
1502
3514
Other module 1
3516
Application Processor
3518
Network
3520
Other module 2
1612/1616
1618
Power
3508
Radio condition
Control
3510
3512
Power consumption
1602
1604/1606
Receiver 1
Receiver 2
Receiver 3
3502
3504
3506
Control module input line
Control module output line
Power consumption input line
Radio condition input line

FIG 36

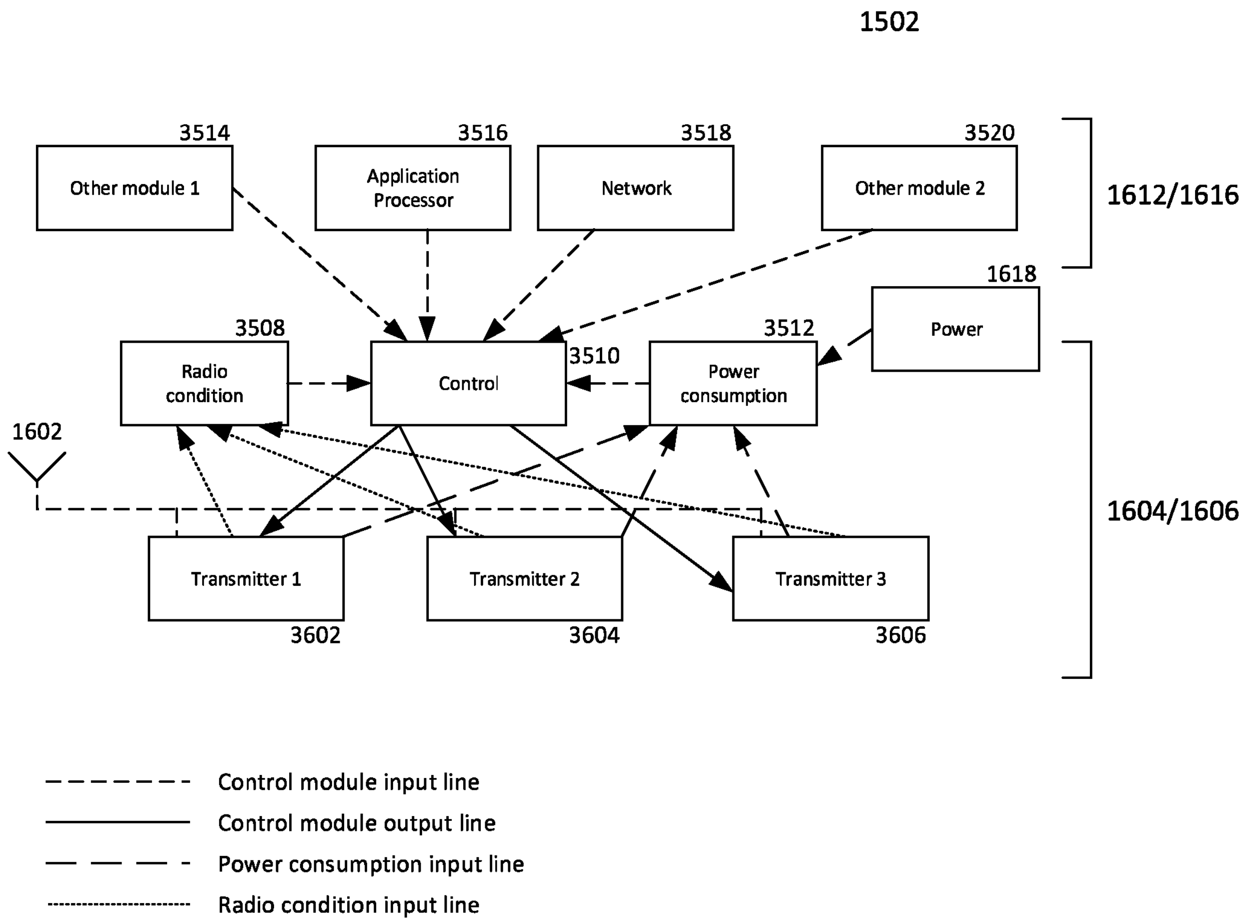
1502
3514
Other module 1
3516
Application Processor
3518
Network
3520
Other module 2
1612/1616
1618
Power
3508
Radio condition
3510
Control
3512
Power consumption
1602
1604/1606
Transmitter 1
3602
Transmitter 2
3604
Transmitter 3
3606
Control module input line
Control module output line
Power consumption input line
Radio condition input line

FIG 37

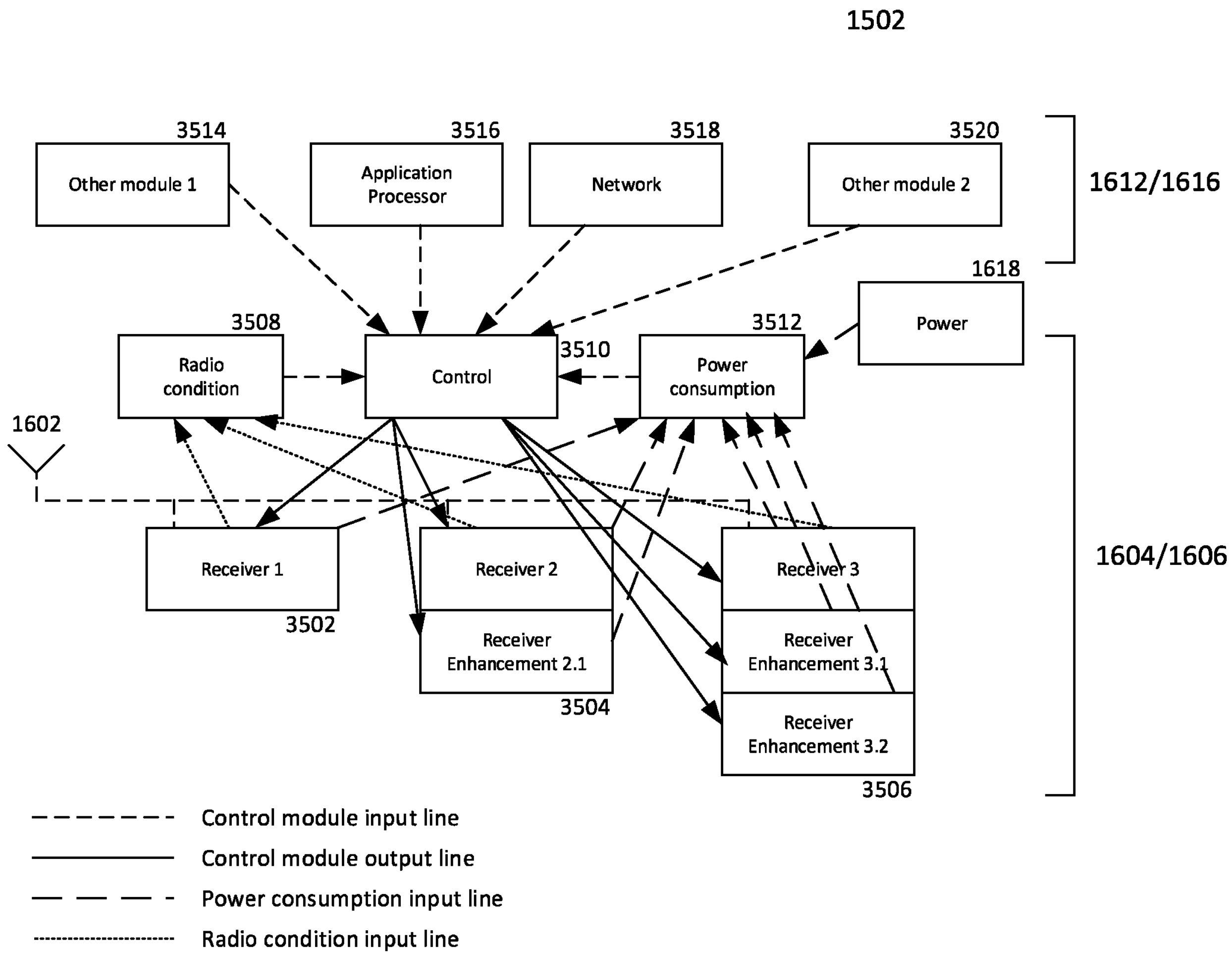
1502
3514
Other module 1
3516
Application Processor
3518
Network
3520
Other module 2
1612/1616
1618
Power
3508
Radio condition
Control
3510
3512
Power consumption
1602
Receiver 1
3502
Receiver 2
Receiver Enhancement 2.1
3504
Receiver 3
Receiver Enhancement 3.1
Receiver Enhancement 3.2
3506
1604/1606
Control module input line
Control module output line
Power consumption input line
Radio condition input line

# FIG 38

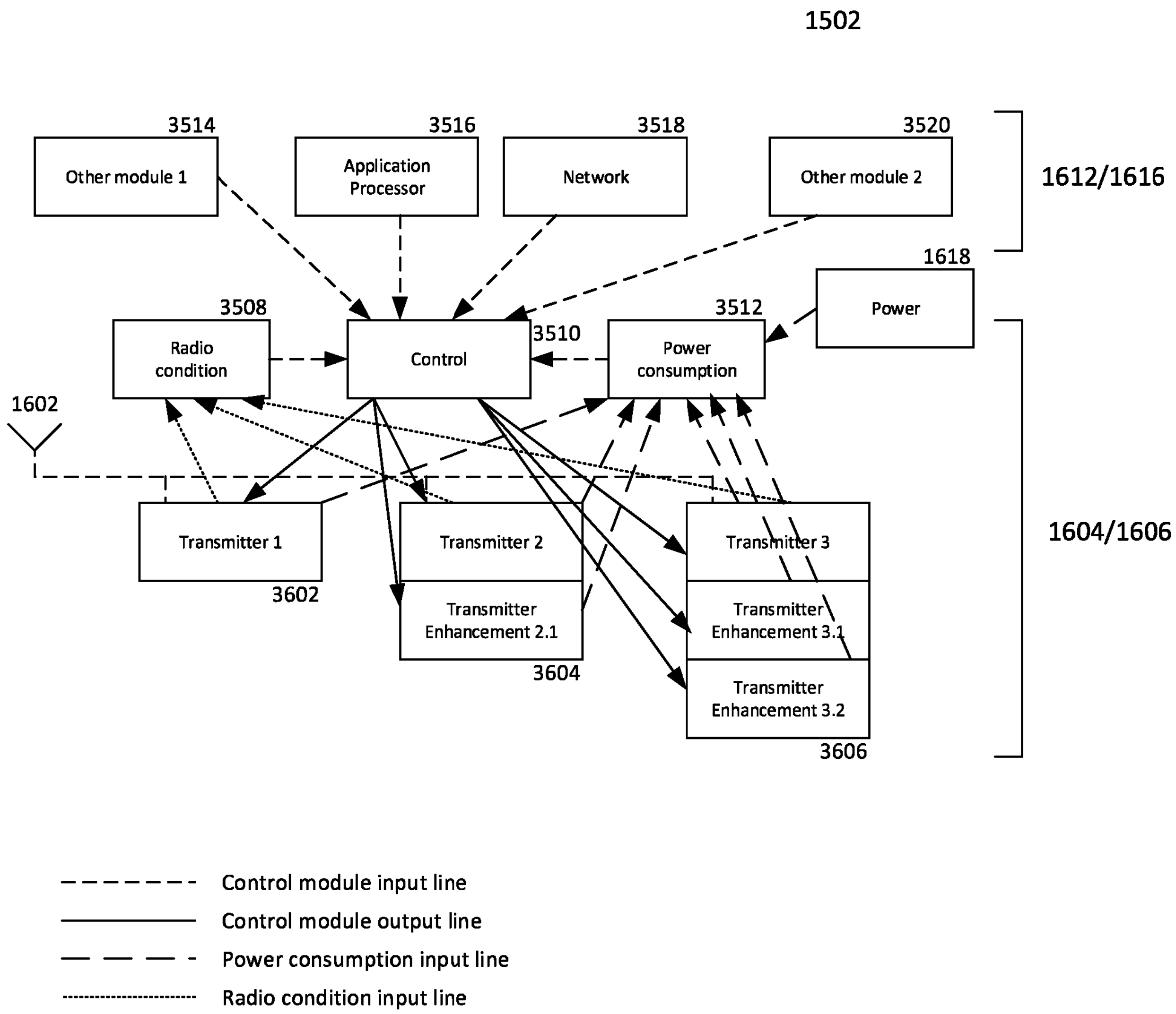
1502
3514
Other module 1
3516
Application Processor
3518
Network
3520
Other module 2
1612/1616
1618
Power
3508
Radio condition
Control
3510
3512
Power consumption
1602
Transmitter 1
3602
Transmitter 2
Transmitter Enhancement 2.1
3604
Transmitter 3
Transmitter Enhancement 3.1
Transmitter Enhancement 3.2
3606
1604/1606
Control module input line
Control module output line
Power consumption input line
Radio condition input line

FIG 39

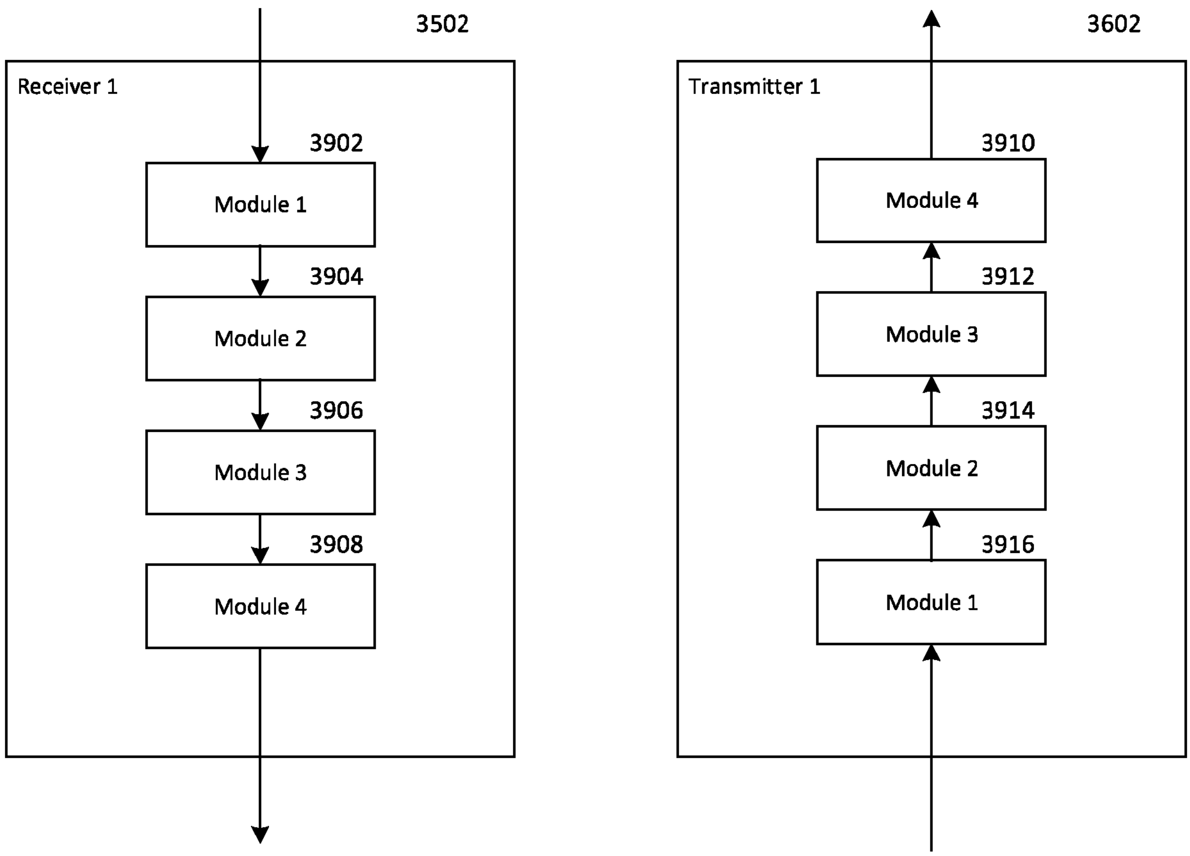
3502
Receiver 1
3902
Module 1
3904
Module 2
3906
Module 3
3908
Module 4
3602
Transmitter 1
3910
Module 4
3912
Module 3
3914
Module 2
3916
Module 1

FIG 40

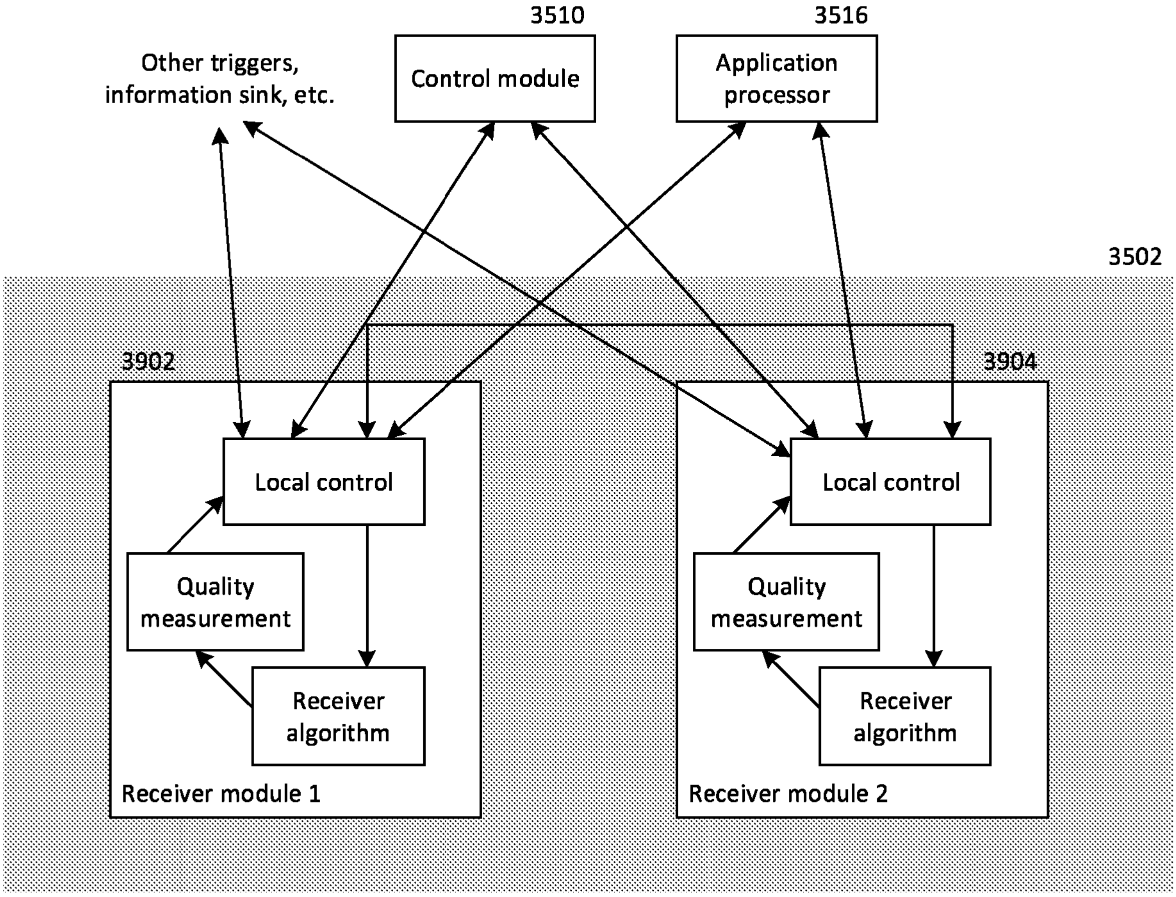
3510
3516
Other triggers, information sink, etc.
Control module
Application processor
3502
3902
3904
Local control
Quality measurement
Receiver algorithm
Receiver module 1
Local control
Quality measurement
Receiver algorithm
Receiver module 2

FIG 41

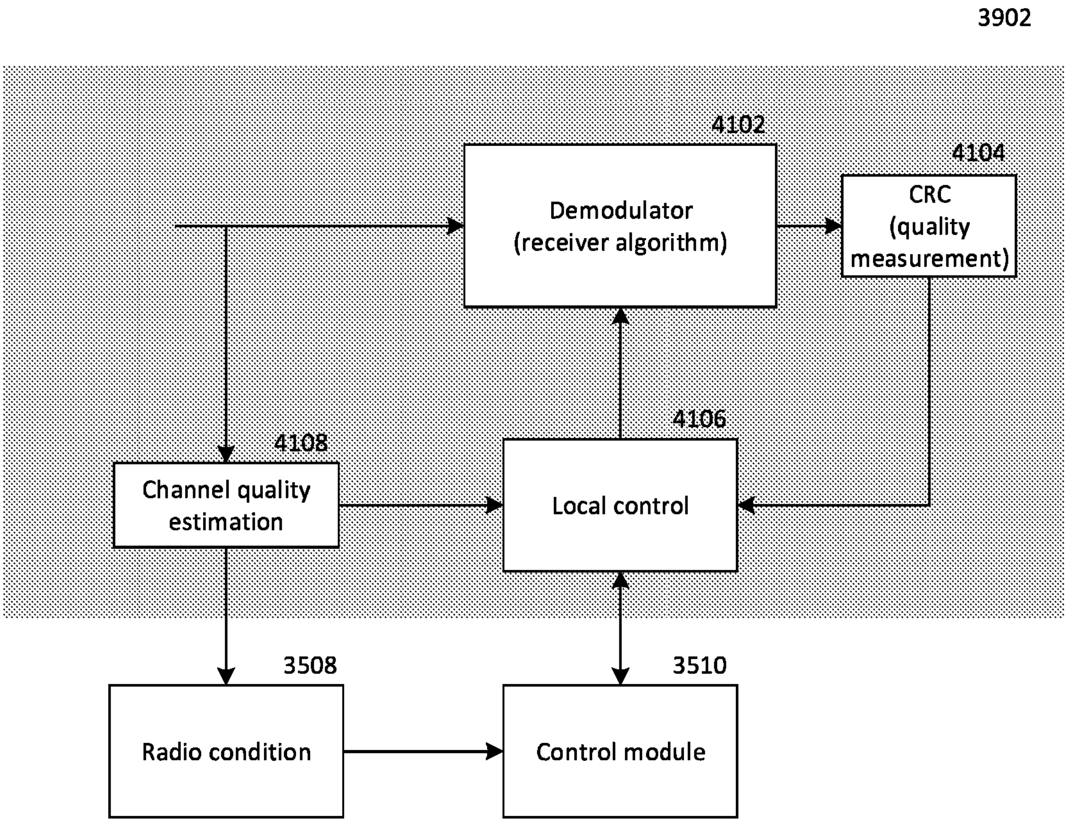
3902
4102
Demodulator
(receiver algorithm)
4104
CRC
(quality
measurement)
4106
Local control
4108
Channel quality
estimation
3508
Radio condition
3510
Control module

FIG 42

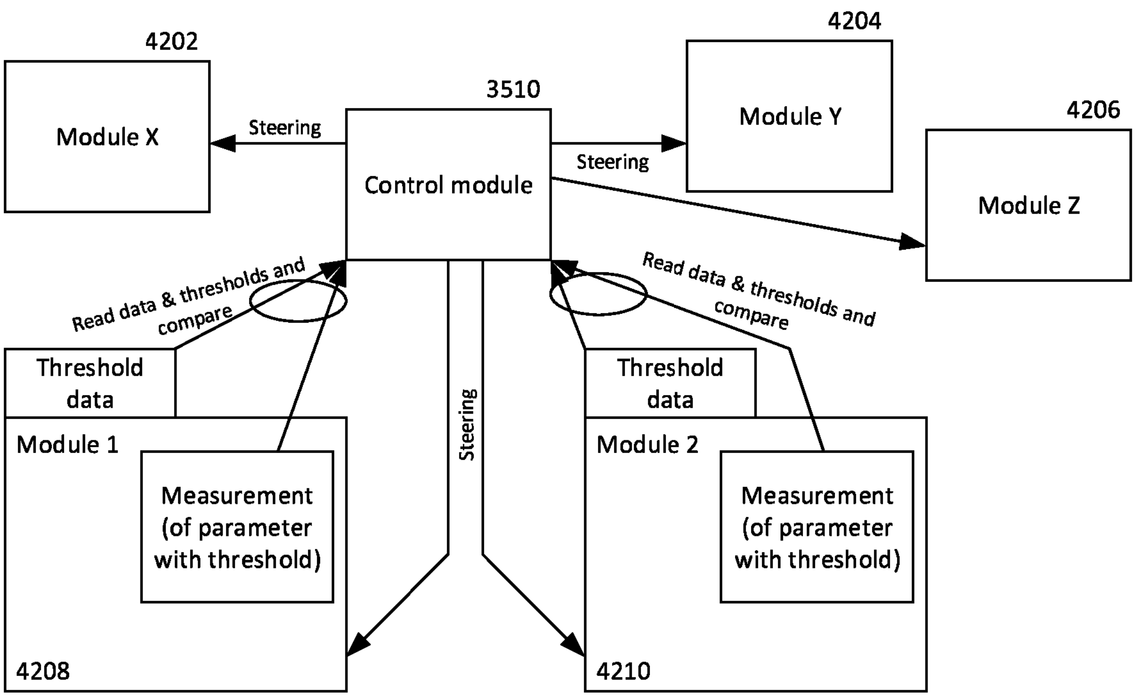
4202
Module X
Steering
3510
Control module
4204
Module Y
Steering
4206
Module Z
Read data & thresholds and compare
Read data & thresholds and compare
Threshold data
Module 1
Measurement (of parameter with threshold)
4208
Steering
Threshold data
Module 2
Measurement (of parameter with threshold)
4210

FIG 43

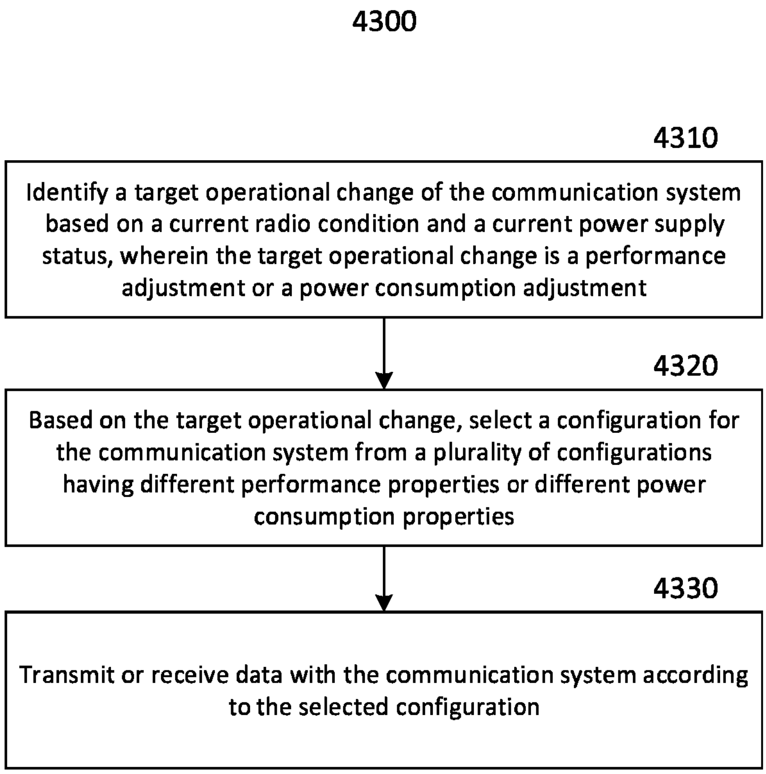
4300
4310
Identify a target operational change of the communication system based on a current radio condition and a current power supply status, wherein the target operational change is a performance adjustment or a power consumption adjustment
4320
Based on the target operational change, select a configuration for the communication system from a plurality of configurations having different performance properties or different power consumption properties
4330
Transmit or receive data with the communication system according to the selected configuration

FIG 44

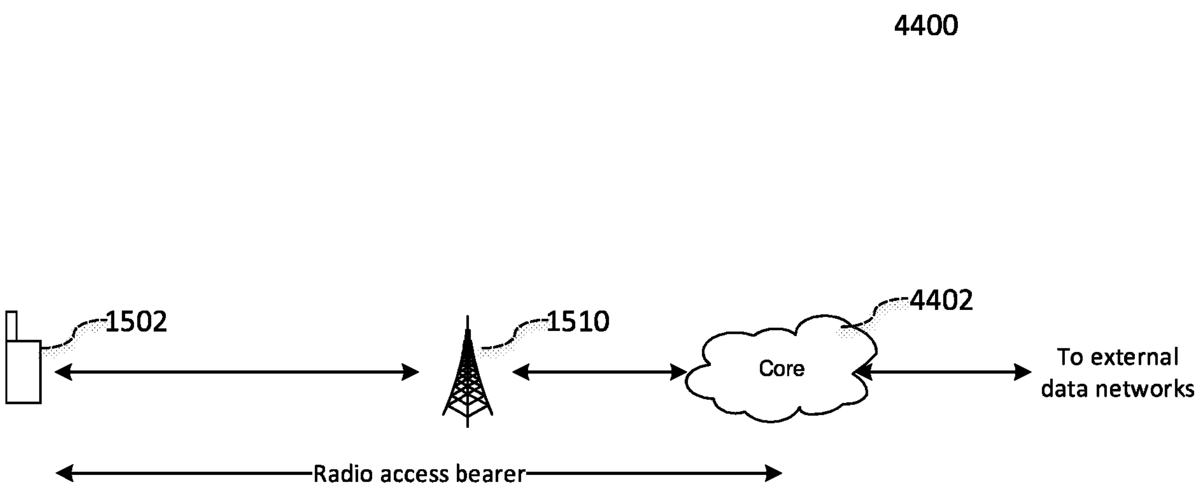
4400
1502
1510
4402
Core
To external
data networks
Radio access bearer

FIG 45

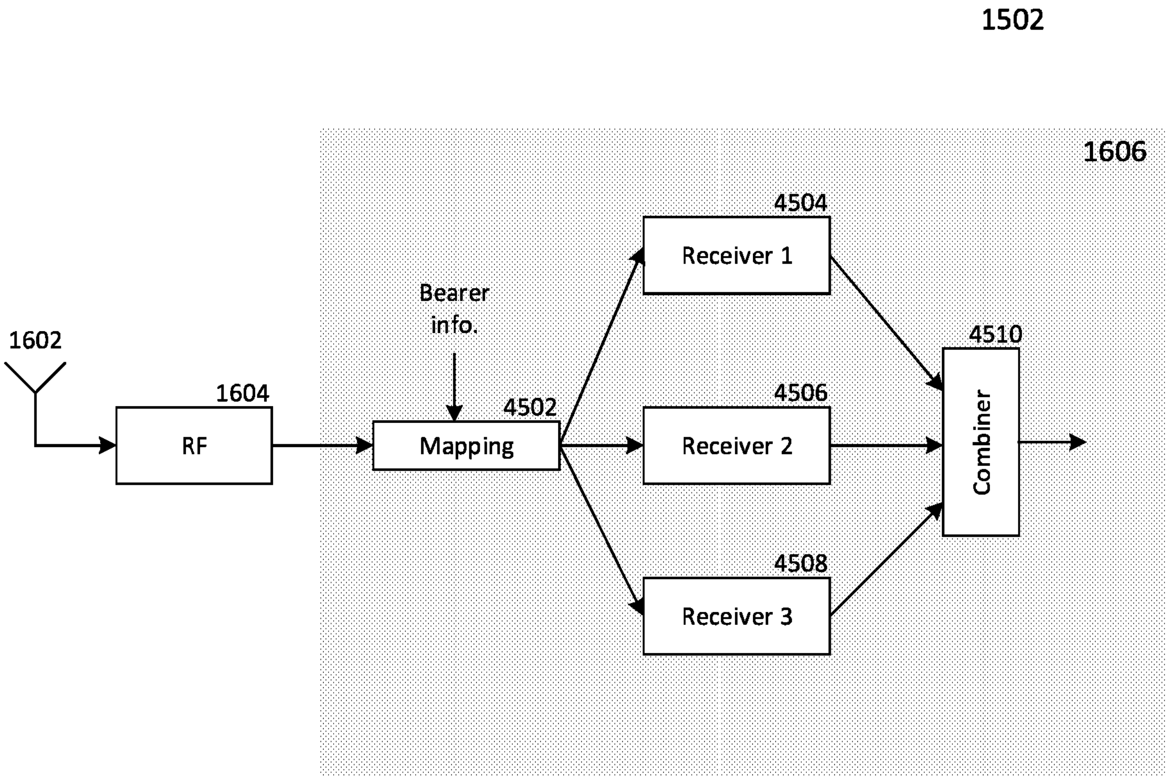
1502
1606
1602
1604
RF
Bearer
info.
4502
Mapping
4504
Receiver 1
4506
Receiver 2
4508
Receiver 3
4510
Combiner

FIG 46

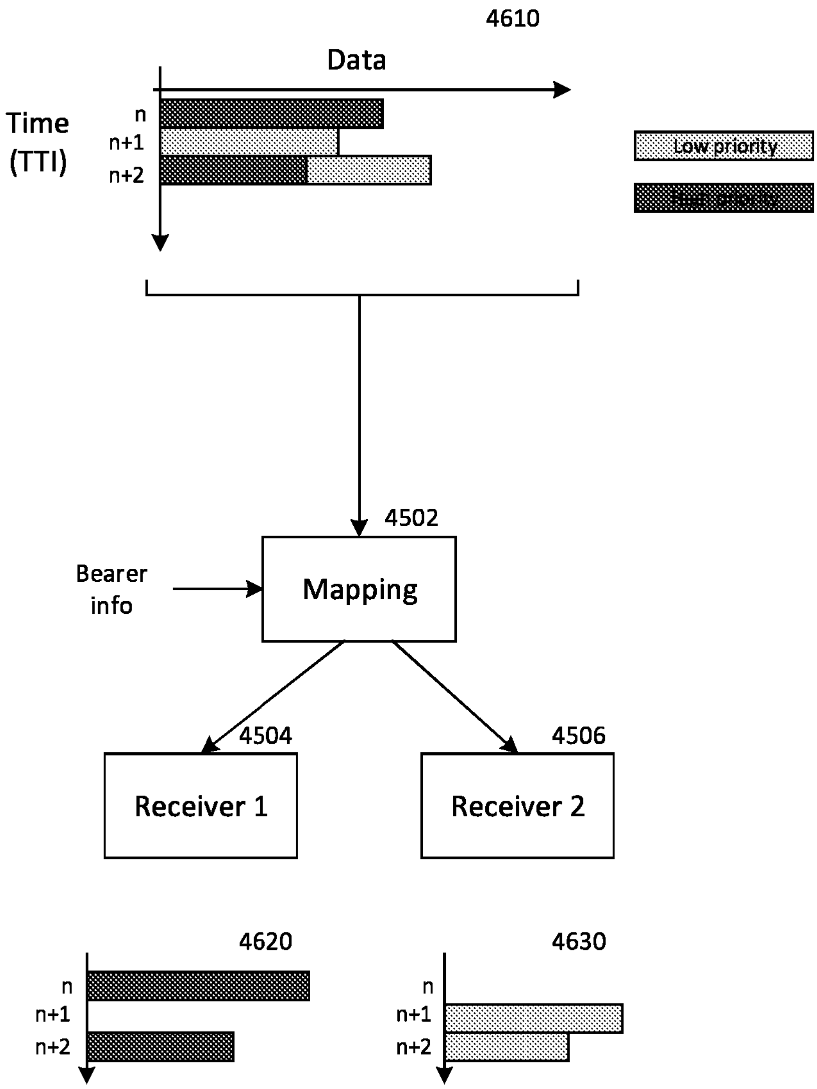
4610
Data
Time
(TTI)
n
n+1
n+2
Low priority
High priority
4502
Bearer
info
Mapping
4504
4506
Receiver 1
Receiver 2
4620
n
n+1
n+2
4630
n
n+1
n+2

# FIG 47

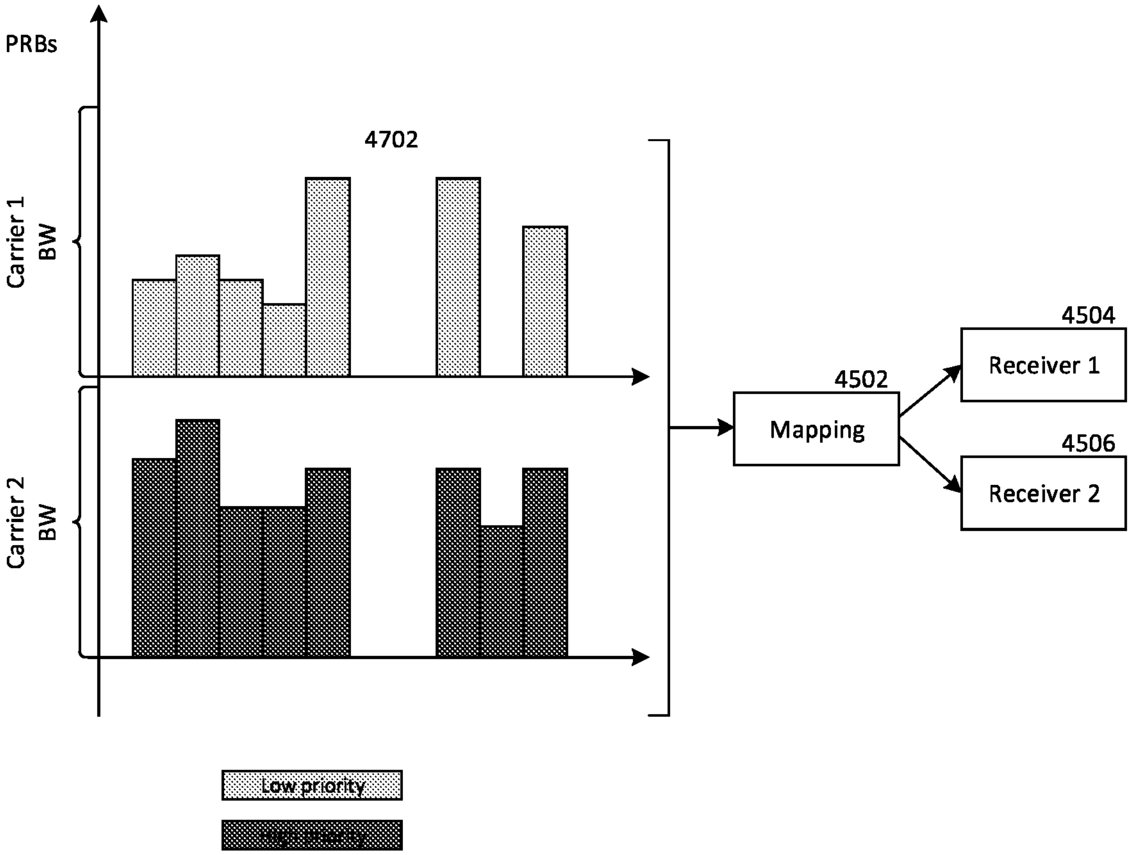
PRBs
Carrier 1 BW
Carrier 2 BW
4702
4502
Mapping
4504
Receiver 1
4506
Receiver 2
Low priority
High priority

FIG 48

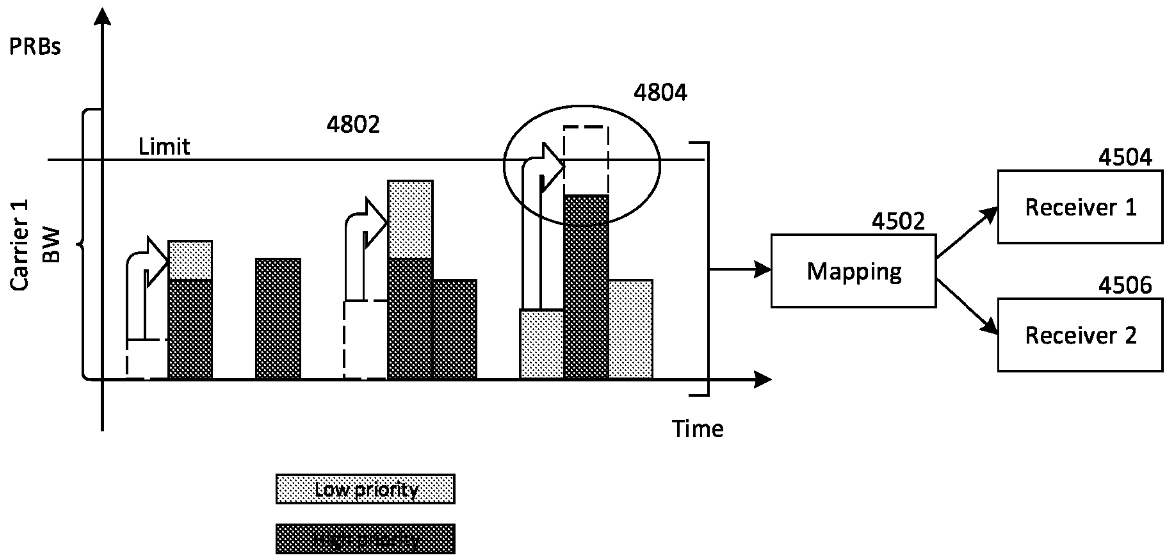
PRBs
4804
4802
Limit
Carrier 1 BW
4504
Receiver 1
4502
Mapping
4506
Receiver 2
Time
Low priority
High priority

FIG 49

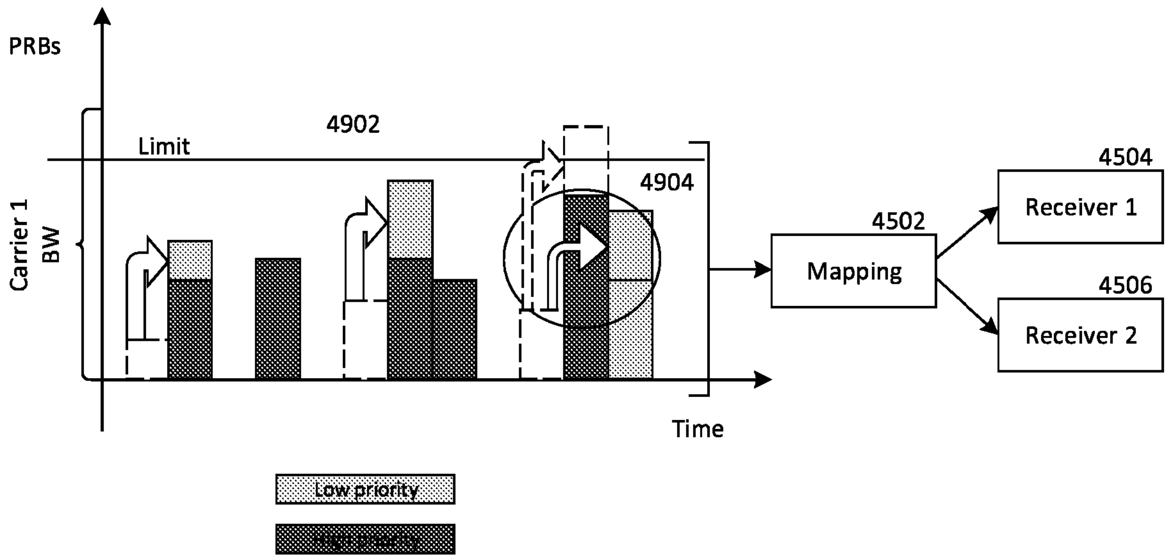
PRBs
Carrier 1 BW
Limit
4902
4904
Time
4502
Mapping
4504
Receiver 1
4506
Receiver 2
Low priority
High priority

FIG 50

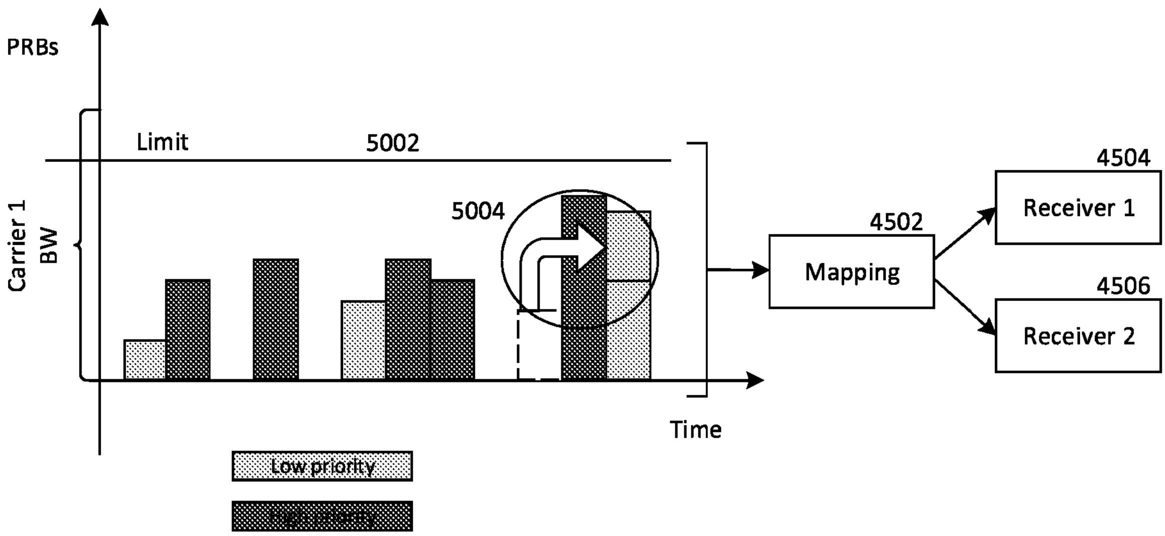
PRBs
Carrier 1 BW
Limit
5002
5004
Time
Low priority
High priority
4502
Mapping
4504
Receiver 1
4506
Receiver 2

FIG 51

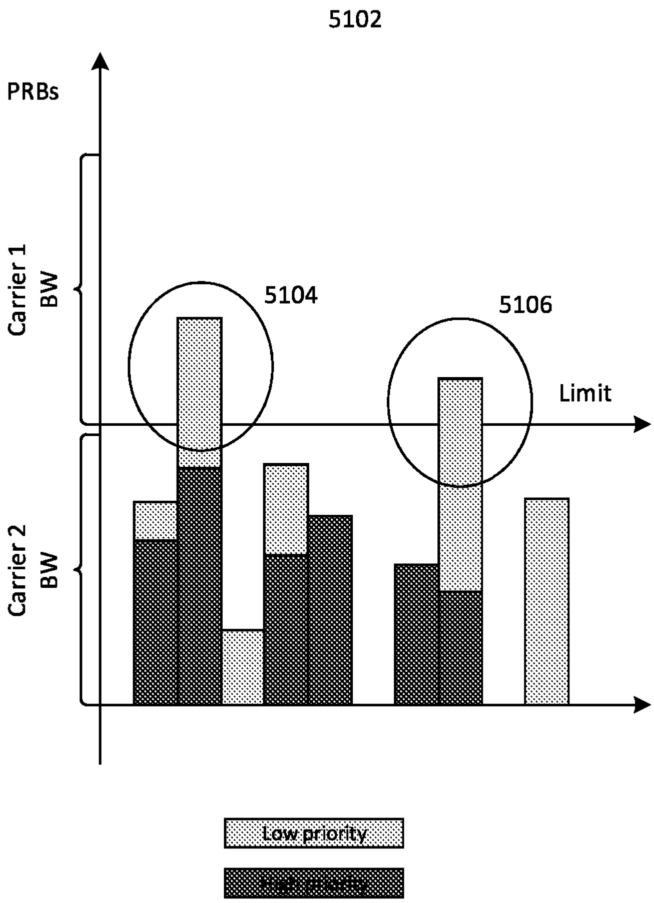
5102
PRBs
Carrier 1 BW
Carrier 2 BW
5104
5106
Limit
Low priority
High priority

FIG 52

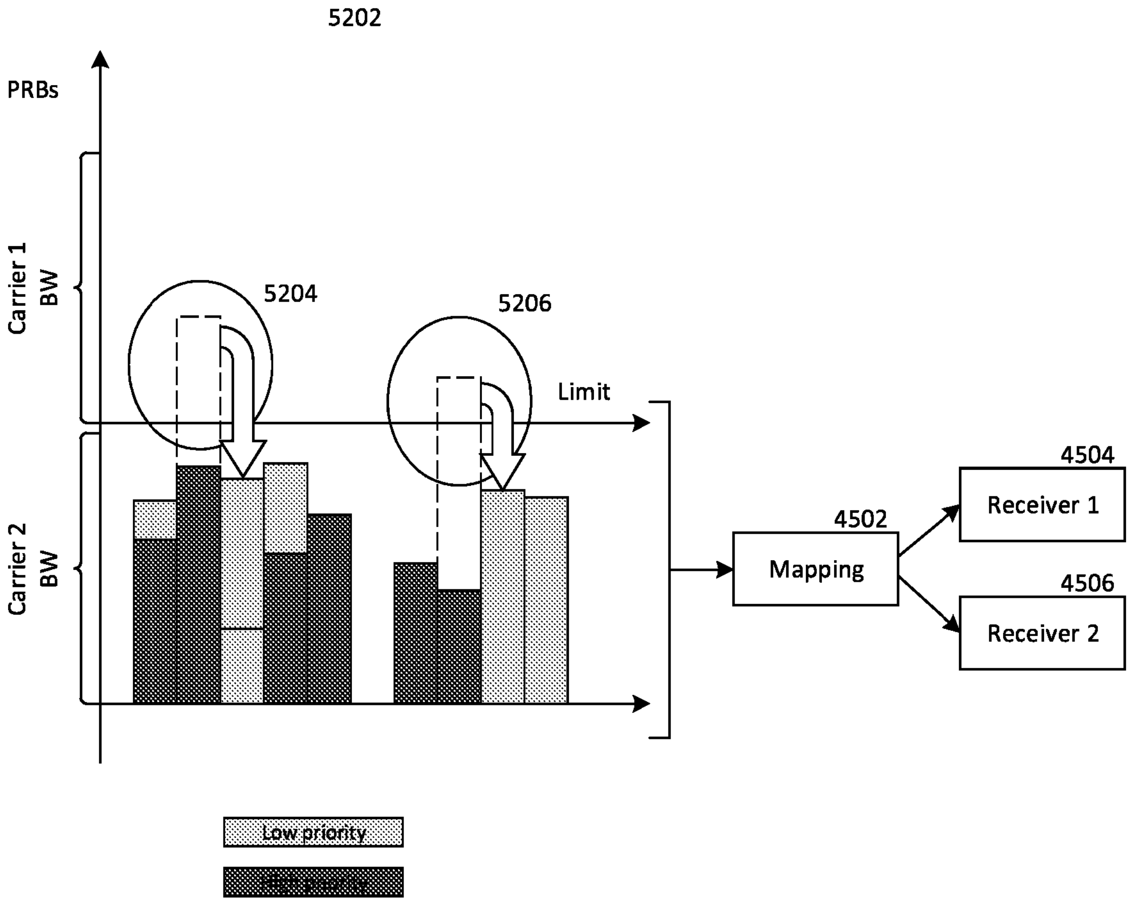
5202
PRBs
Carrier 1 BW
Carrier 2 BW
5204
5206
Limit
4502
Mapping
4504
Receiver 1
4506
Receiver 2
Low priority
High priority

FIG 53

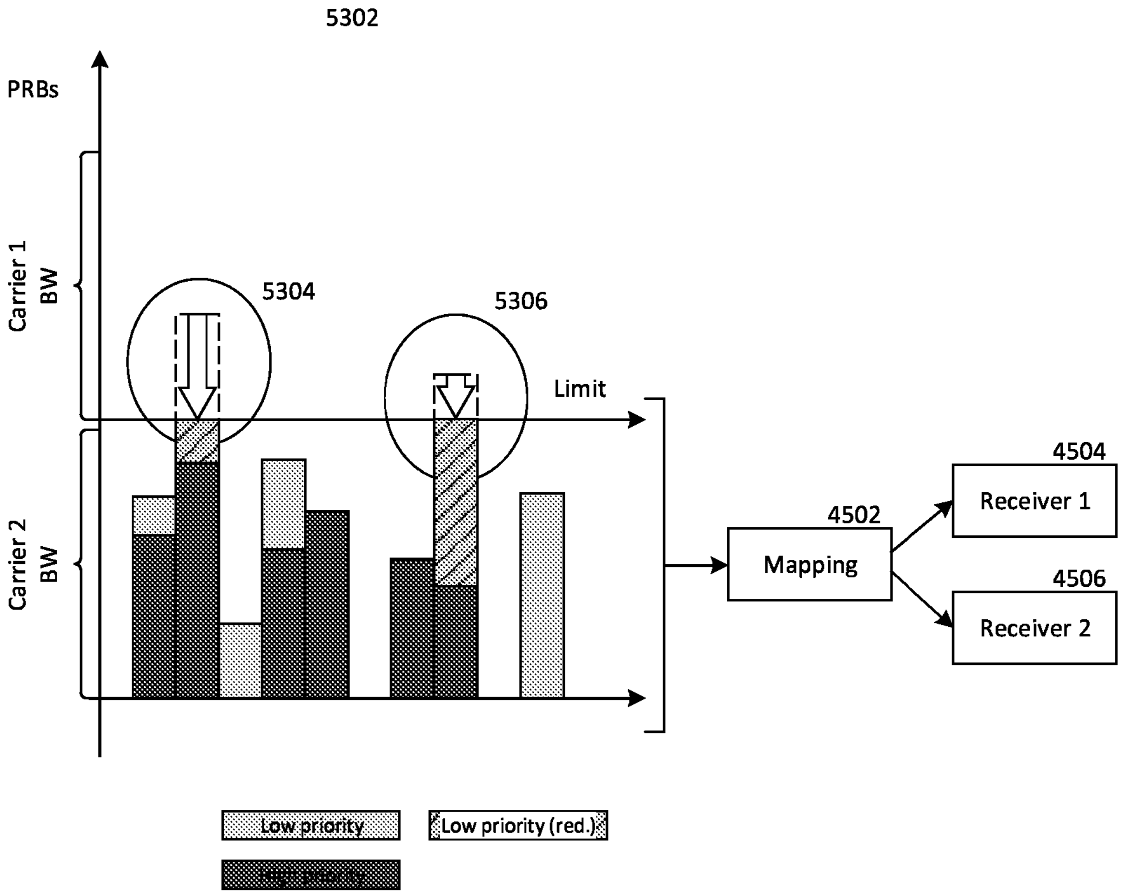
5302
PRBs
Carrier 1 BW
Carrier 2 BW
5304
5306
Limit
4502
Mapping
4504
Receiver 1
4506
Receiver 2
Low priority
Low priority (red.)

FIG 54A

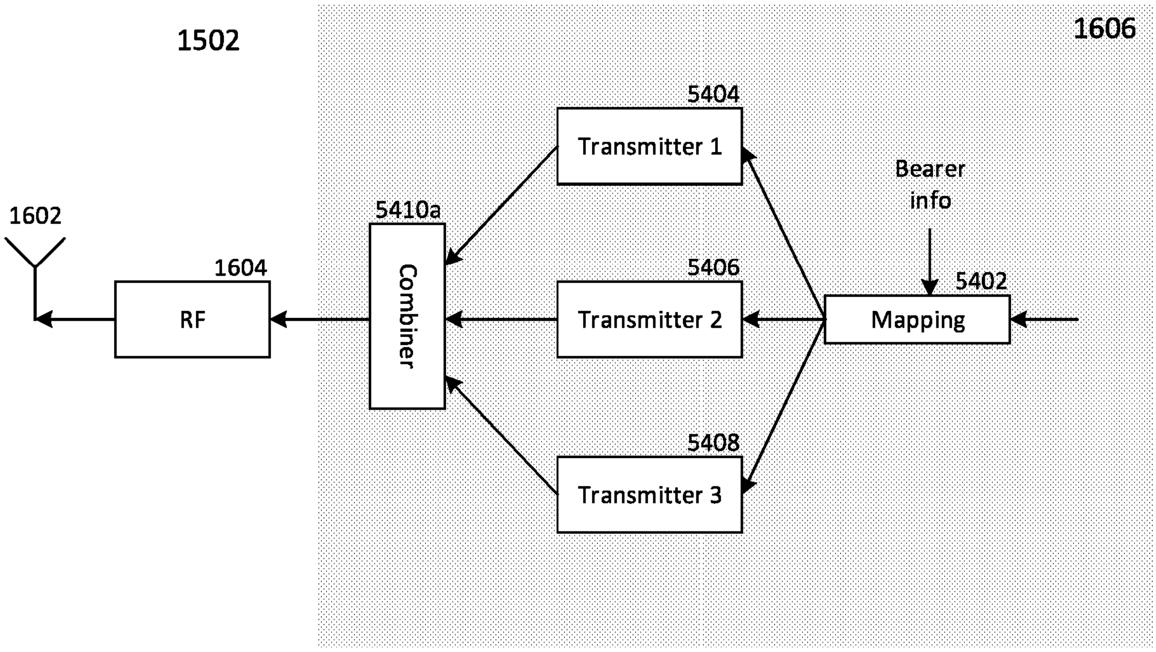


FIG 54B

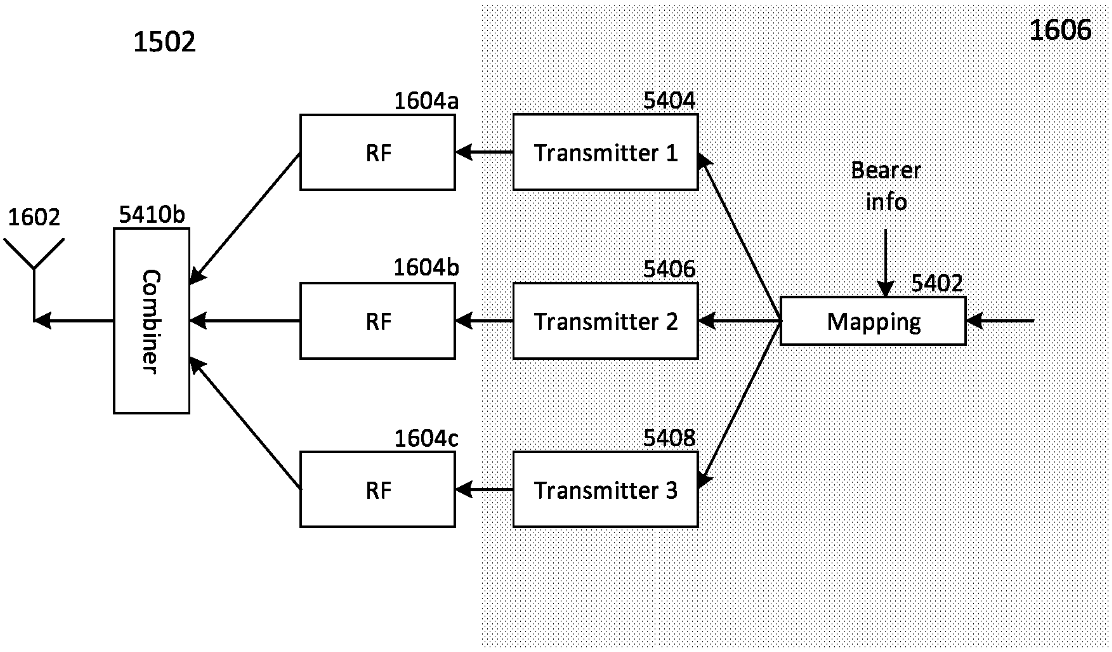

FIG 55

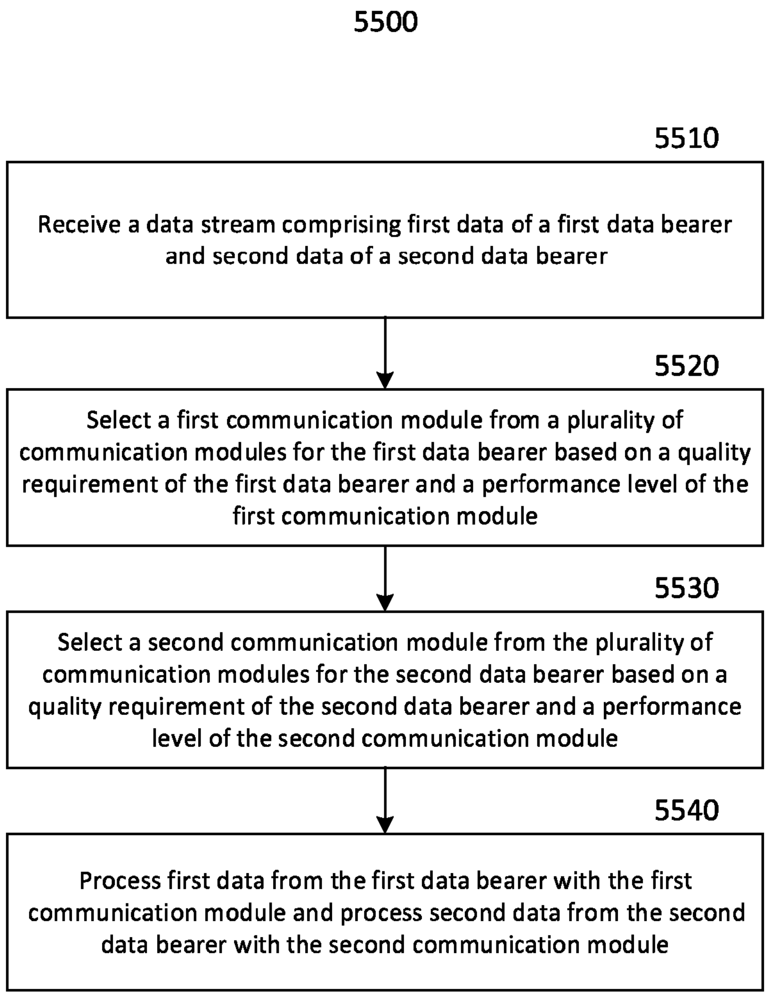
5500
5510
Receive a data stream comprising first data of a first data bearer and second data of a second data bearer
5520
Select a first communication module from a plurality of communication modules for the first data bearer based on a quality requirement of the first data bearer and a performance level of the first communication module
5530
Select a second communication module from the plurality of communication modules for the second data bearer based on a quality requirement of the second data bearer and a performance level of the second communication module
5540
Process first data from the first data bearer with the first communication module and process second data from the second data bearer with the second communication module

FIG 56

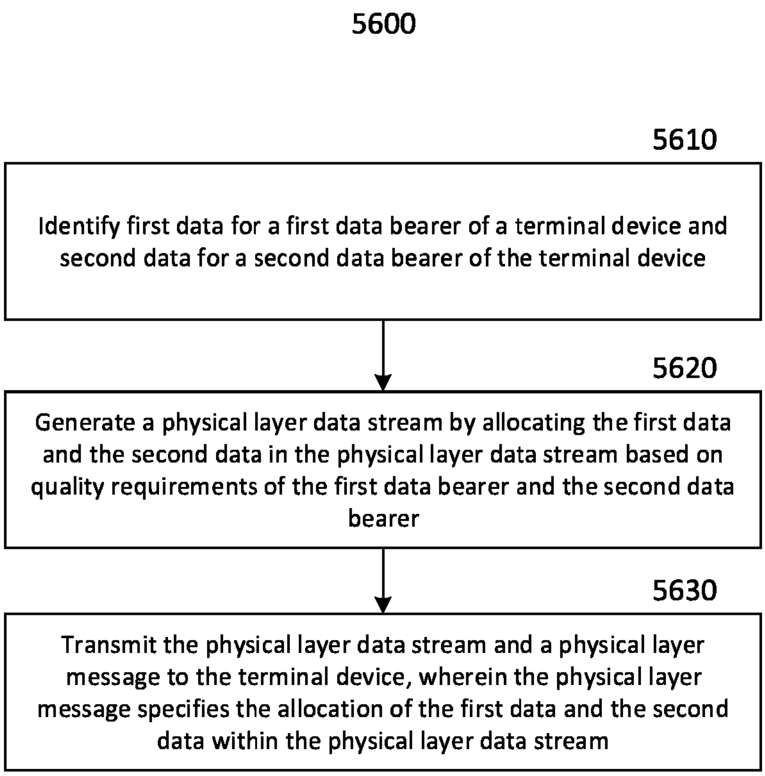
5600
5610
Identify first data for a first data bearer of a terminal device and second data for a second data bearer of the terminal device
5620
Generate a physical layer data stream by allocating the first data and the second data in the physical layer data stream based on quality requirements of the first data bearer and the second data bearer
5630
Transmit the physical layer data stream and a physical layer message to the terminal device, wherein the physical layer message specifies the allocation of the first data and the second data within the physical layer data stream

FIG 57

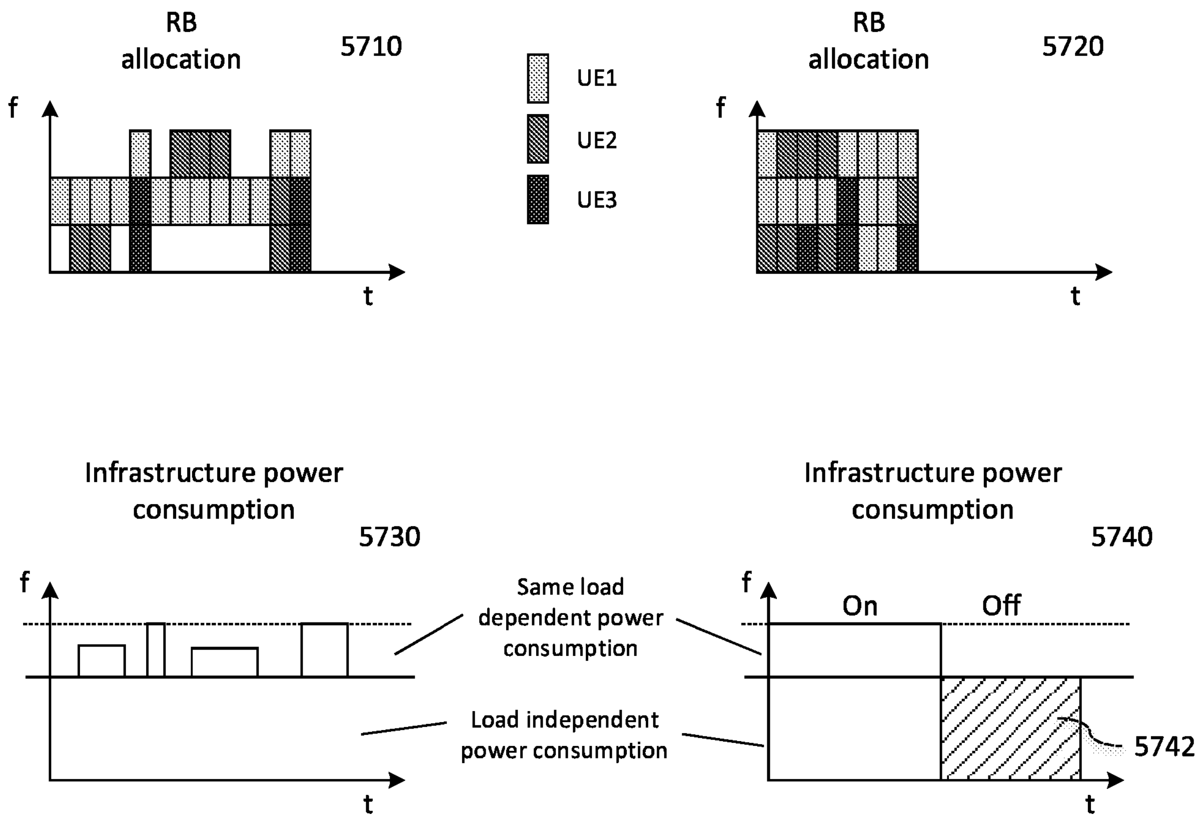
RB
allocation
5710
f
t
UE1
UE2
UE3
RB
allocation
5720
f
t
Infrastructure power
consumption
5730
f
t
Same load
dependent power
consumption
Load independent
power consumption
Infrastructure power
consumption
5740
f
On
Off
5742
t

FIG 58

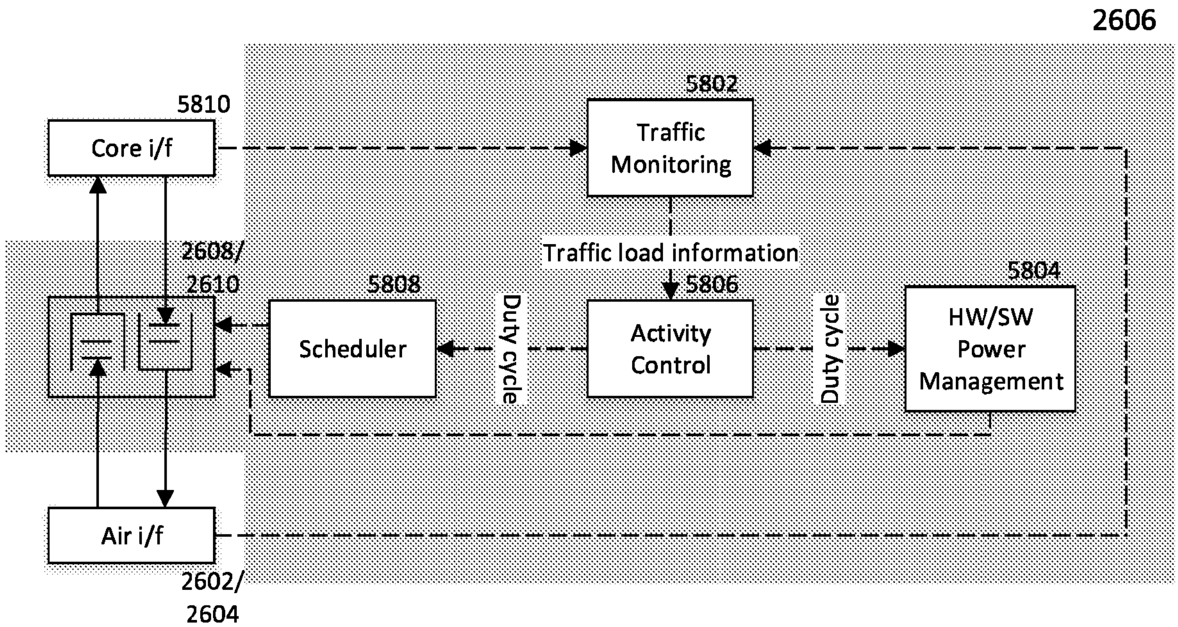
2606
5802
Traffic Monitoring
5810
Core i/f
2608/
2610
5808
Scheduler
Duty cycle
Traffic load information
5806
Activity Control
Duty cycle
5804
HW/SW Power Management
Air i/f
2602/
2604

FIG 59

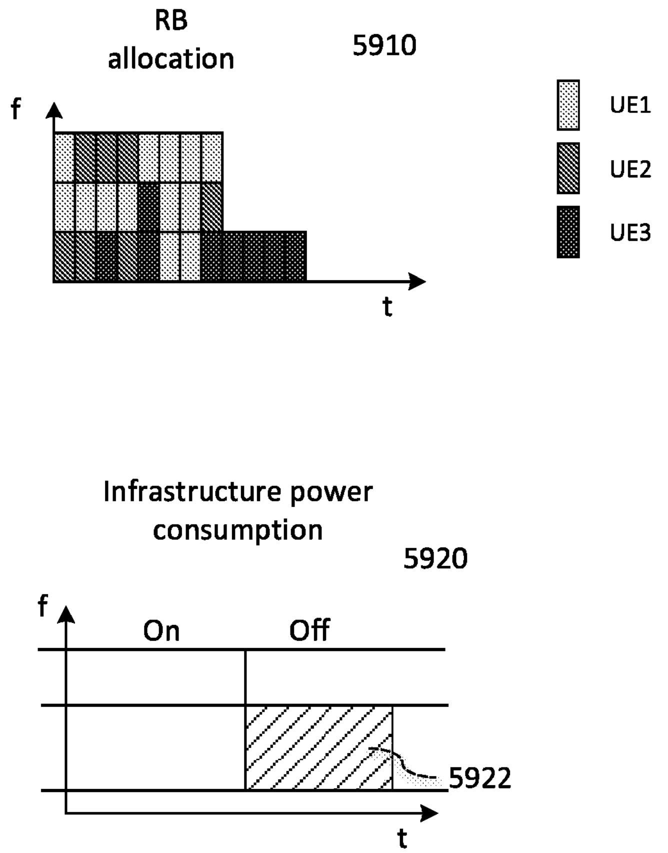
RB
allocation
5910
f
t
UE1
UE2
UE3
Infrastructure power
consumption
5920
f
On
Off
5922
t

FIG 60

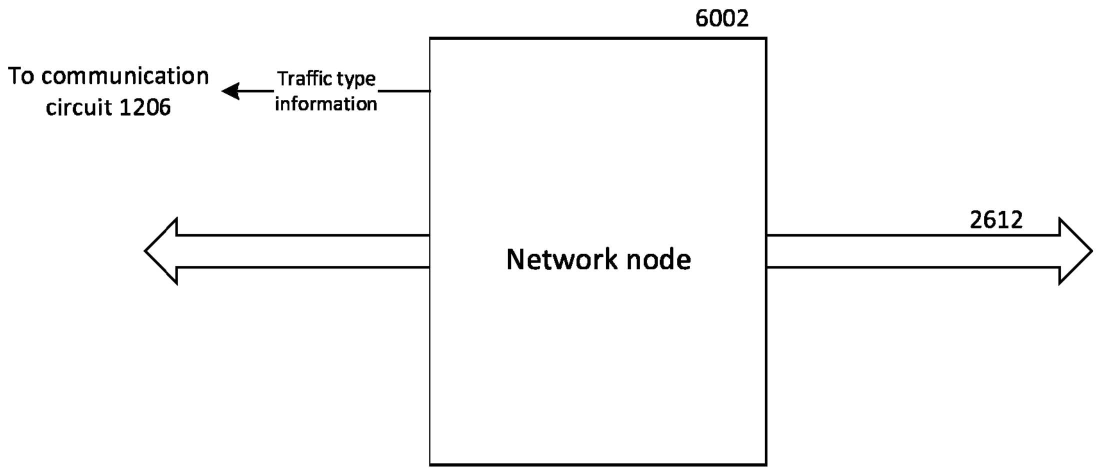
6002
To communication circuit 1206
Traffic type information
Network node
2612

FIG 61

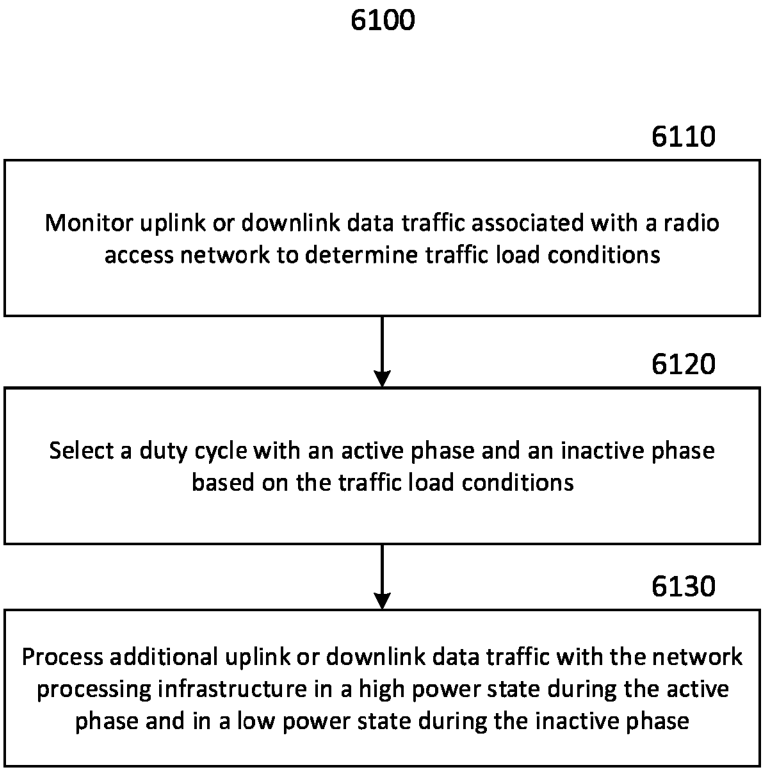
6100
6110
Monitor uplink or downlink data traffic associated with a radio access network to determine traffic load conditions
6120
Select a duty cycle with an active phase and an inactive phase based on the traffic load conditions
6130
Process additional uplink or downlink data traffic with the network processing infrastructure in a high power state during the active phase and in a low power state during the inactive phase

FIG 62

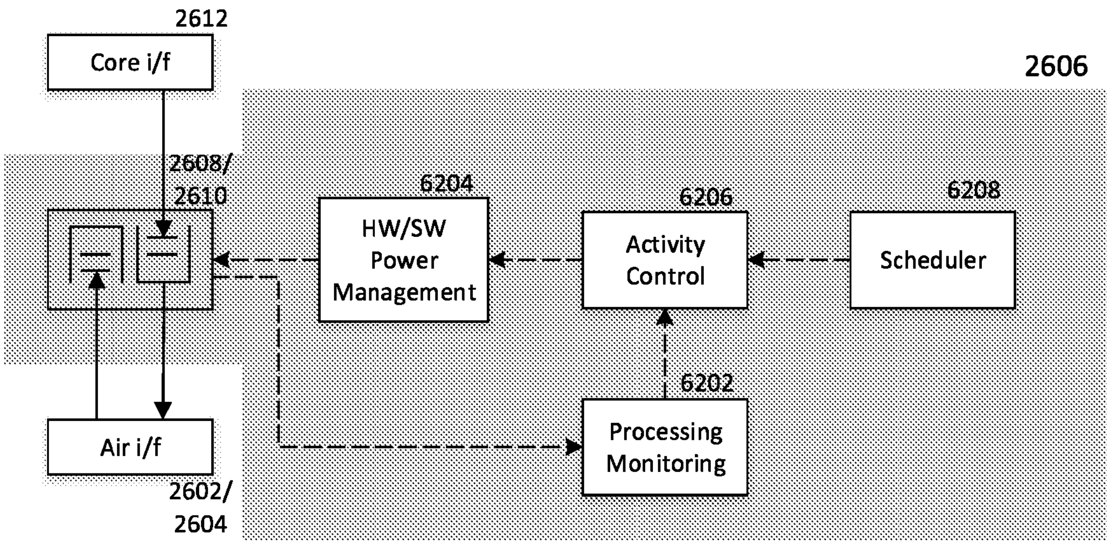
2612
Core i/f
2606
2608/
2610
6204
HW/SW
Power
Management
6206
Activity
Control
6208
Scheduler
6202
Processing
Monitoring
Air i/f
2602/
2604

FIG 63

6310

HARQ completes in 600us for 3 cells

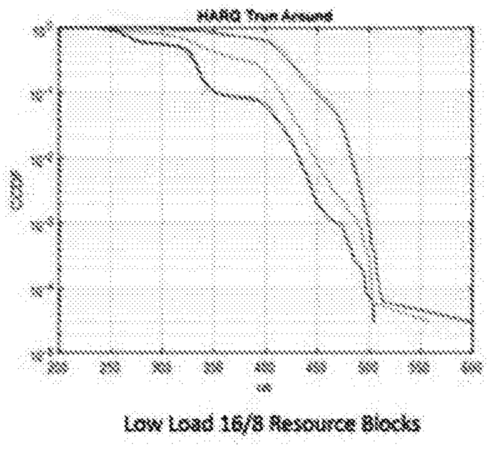


Low Load 16/8 Resource Blocks

6320

HARQ completes in 1800us for 3 cells

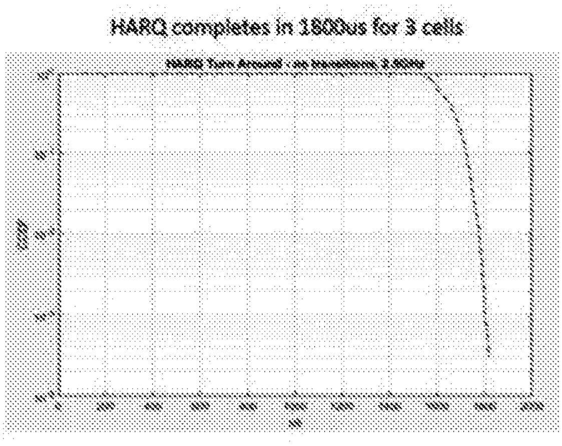

High Load 100/50 Resource Blocks

FIG 64

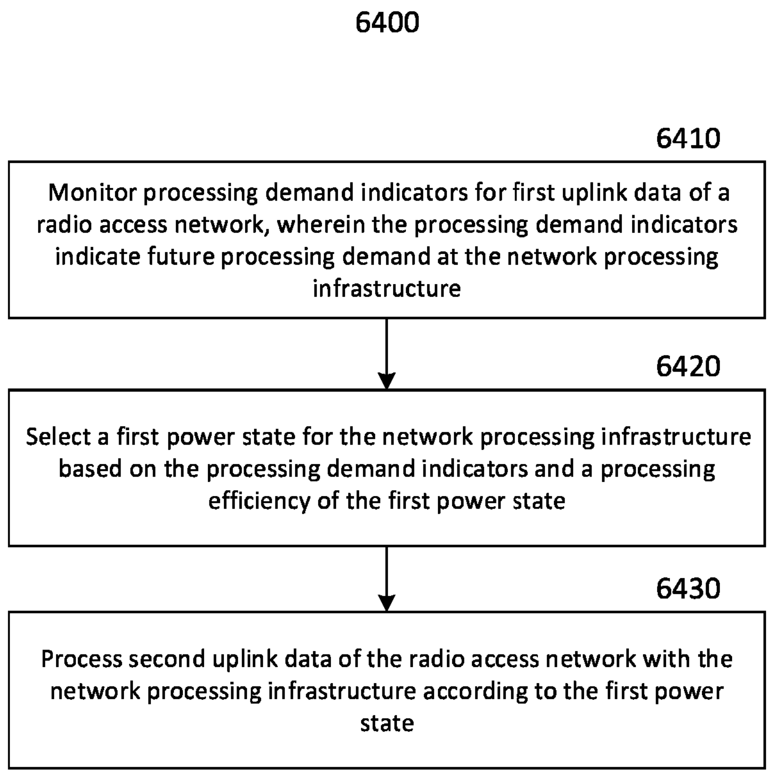
6400
6410
Monitor processing demand indicators for first uplink data of a radio access network, wherein the processing demand indicators indicate future processing demand at the network processing infrastructure
6420
Select a first power state for the network processing infrastructure based on the processing demand indicators and a processing efficiency of the first power state
6430
Process second uplink data of the radio access network with the network processing infrastructure according to the first power state

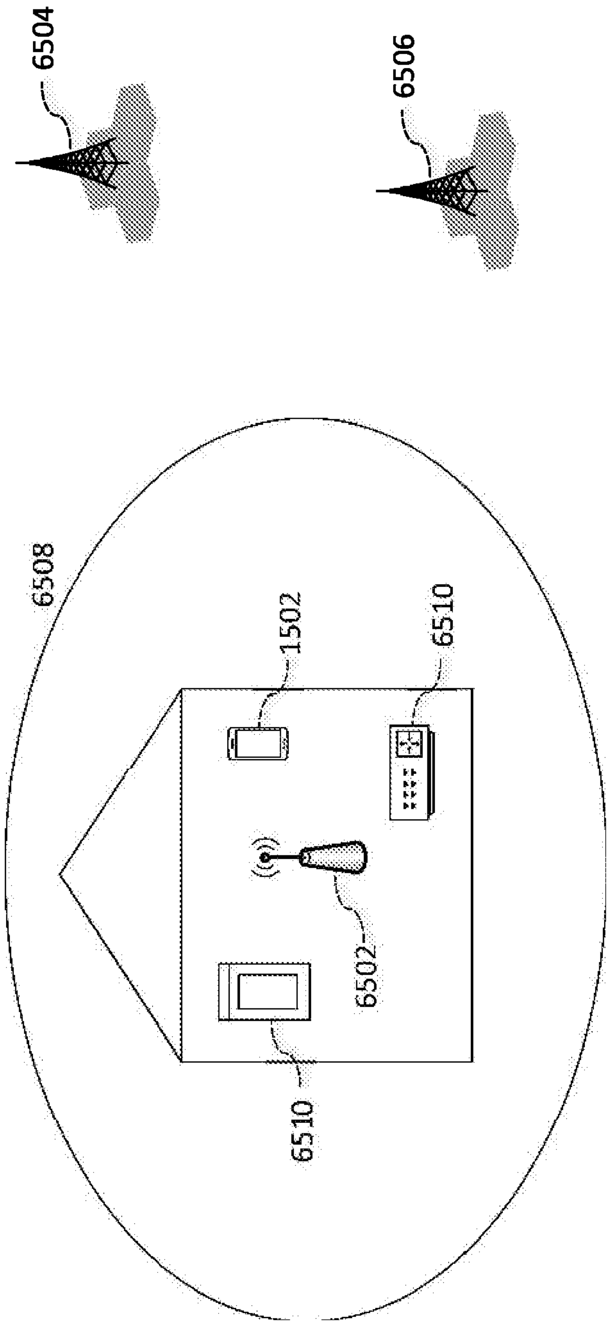


FIG 65

FIG 66

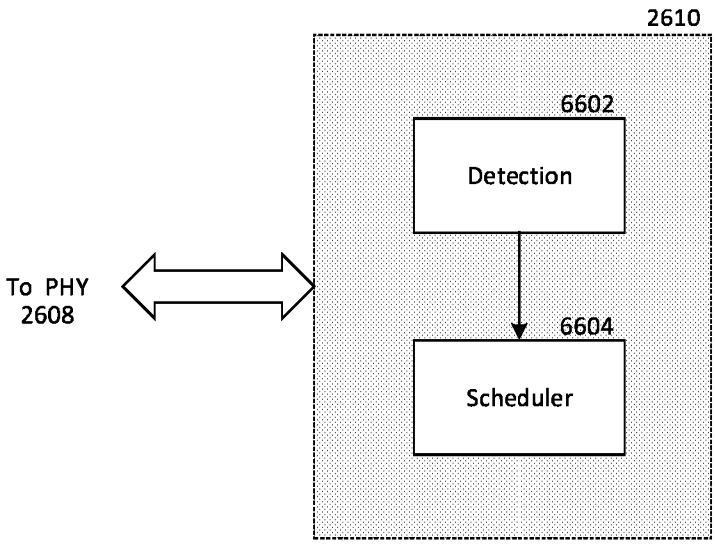

FIG 67

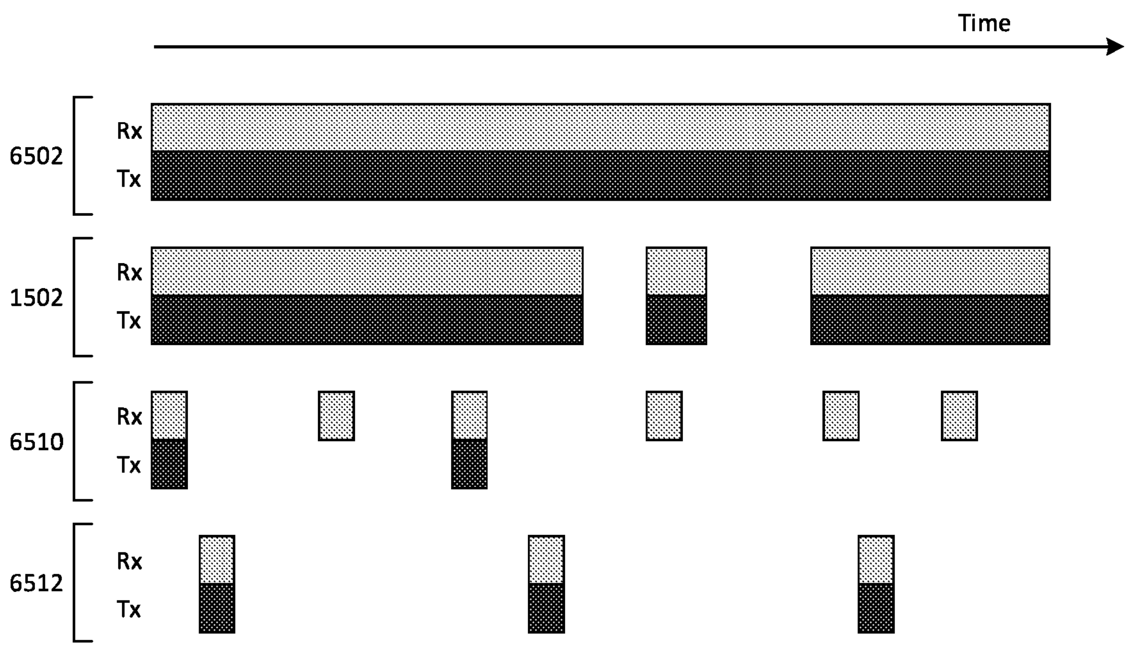

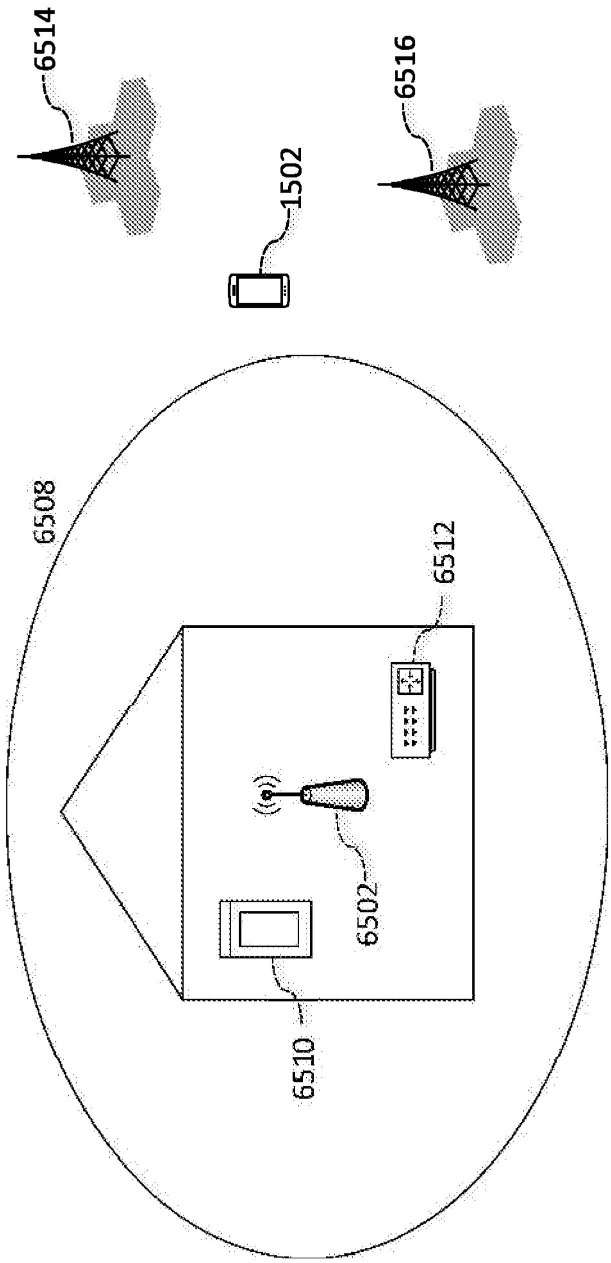


FIG 68

FIG 69A

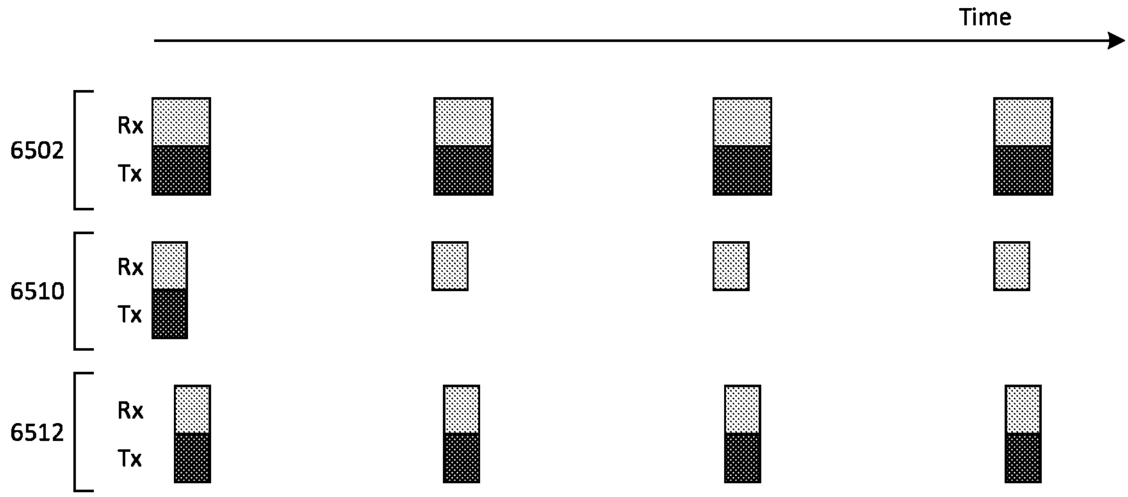


FIG 69B

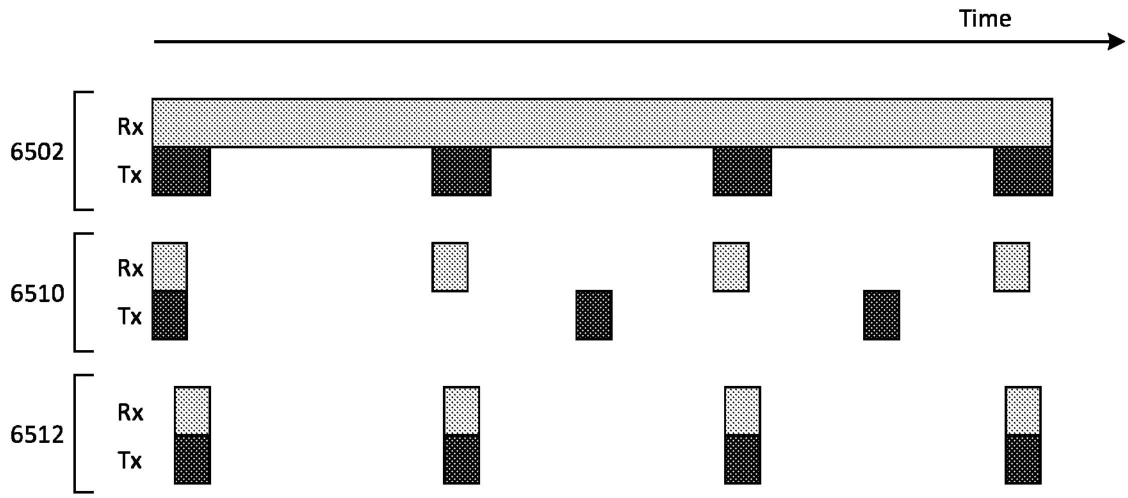

FIG 70

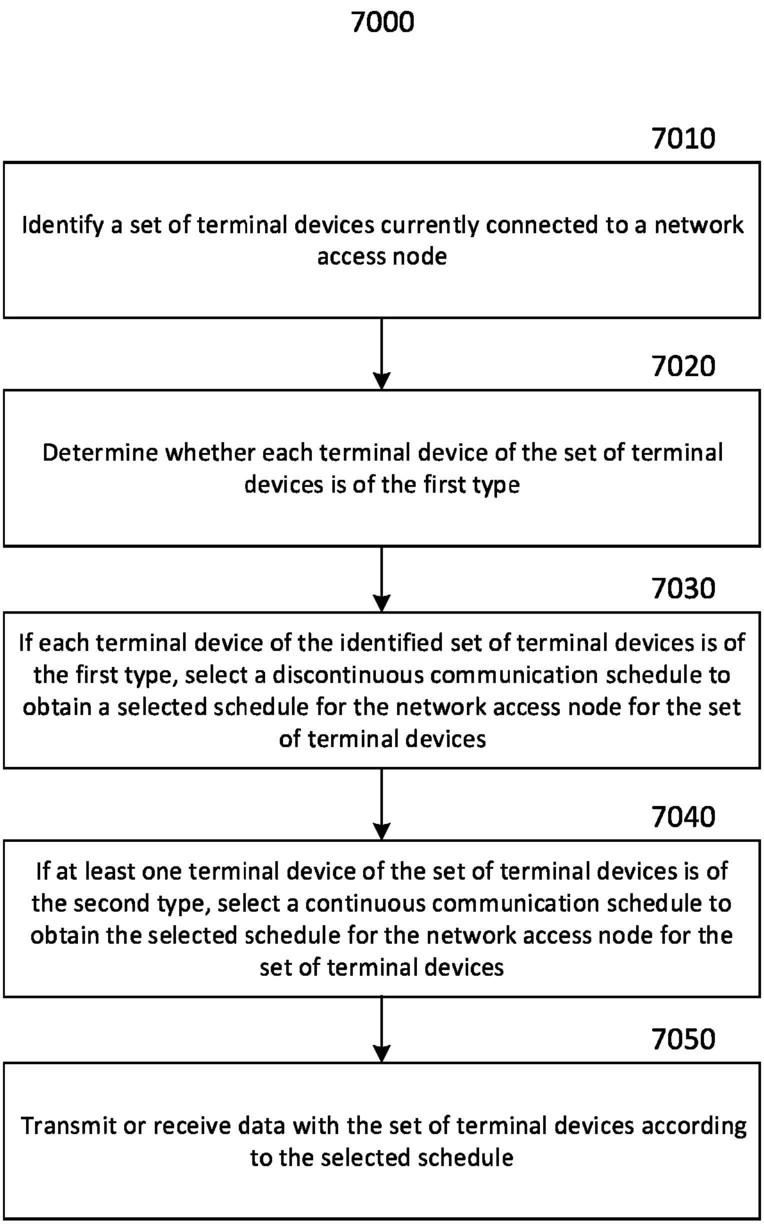
7000
7010
Identify a set of terminal devices currently connected to a network access node
7020
Determine whether each terminal device of the set of terminal devices is of the first type
7030
If each terminal device of the identified set of terminal devices is of the first type, select a discontinuous communication schedule to obtain a selected schedule for the network access node for the set of terminal devices
7040
If at least one terminal device of the set of terminal devices is of the second type, select a continuous communication schedule to obtain the selected schedule for the network access node for the set of terminal devices
7050
Transmit or receive data with the set of terminal devices according to the selected schedule

FIG 71

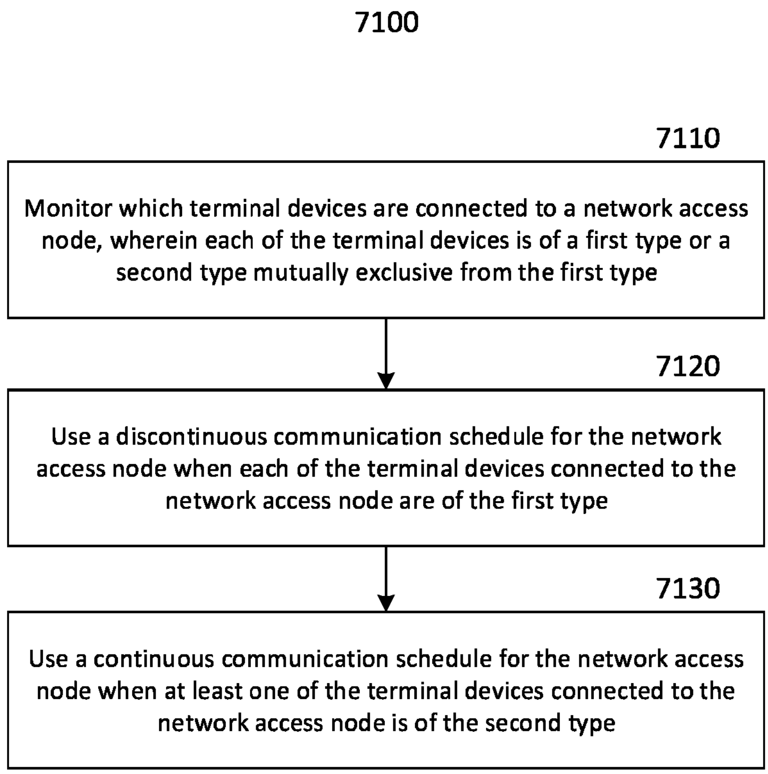
7100
7110
Monitor which terminal devices are connected to a network access node, wherein each of the terminal devices is of a first type or a second type mutually exclusive from the first type
7120
Use a discontinuous communication schedule for the network access node when each of the terminal devices connected to the network access node are of the first type
7130
Use a continuous communication schedule for the network access node when at least one of the terminal devices connected to the network access node is of the second type

FIG 72

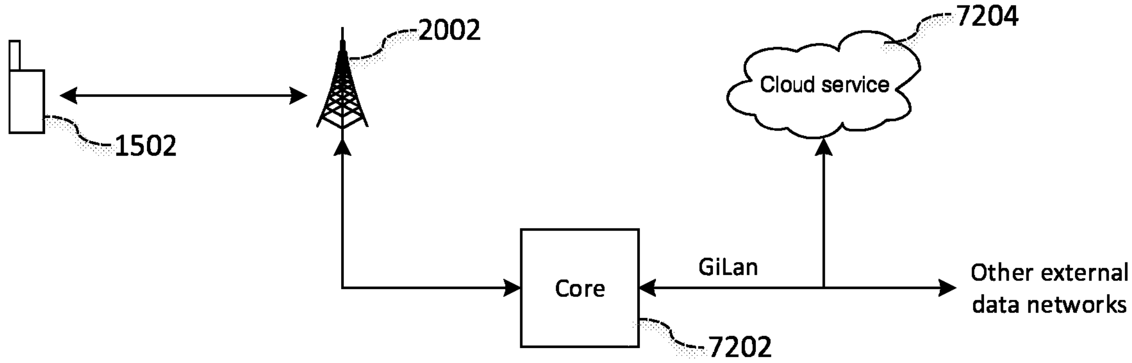
2002
7204
Cloud service
1502
Core
GiLan
Other external
data networks
7202

FIG 73

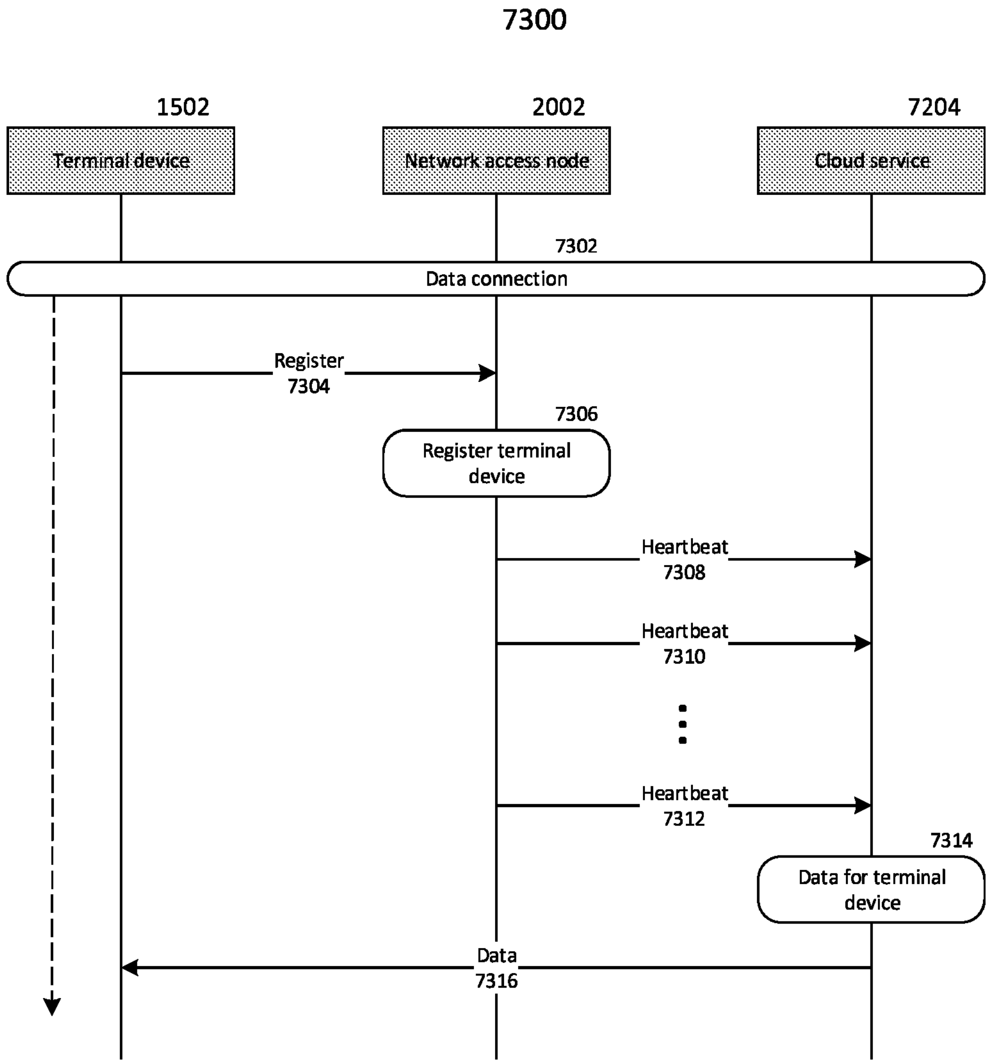
7300
1502
2002
7204
Terminal device
Network access node
Cloud service
7302
Data connection
Register
7304
7306
Register terminal device
Heartbeat
7308
Heartbeat
7310
Heartbeat
7312
7314
Data for terminal device
Data
7316

FIG 74

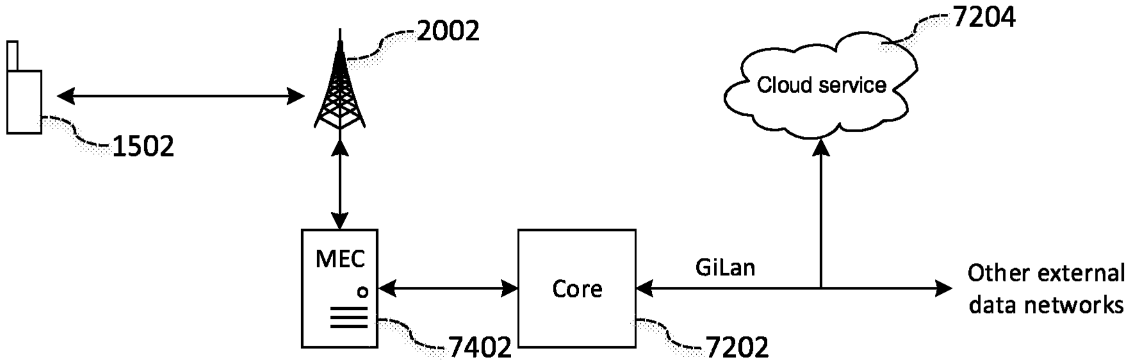
2002
7204
Cloud service
1502
MEC
Core
GiLan
Other external
data networks
7402
7202

FIG 75

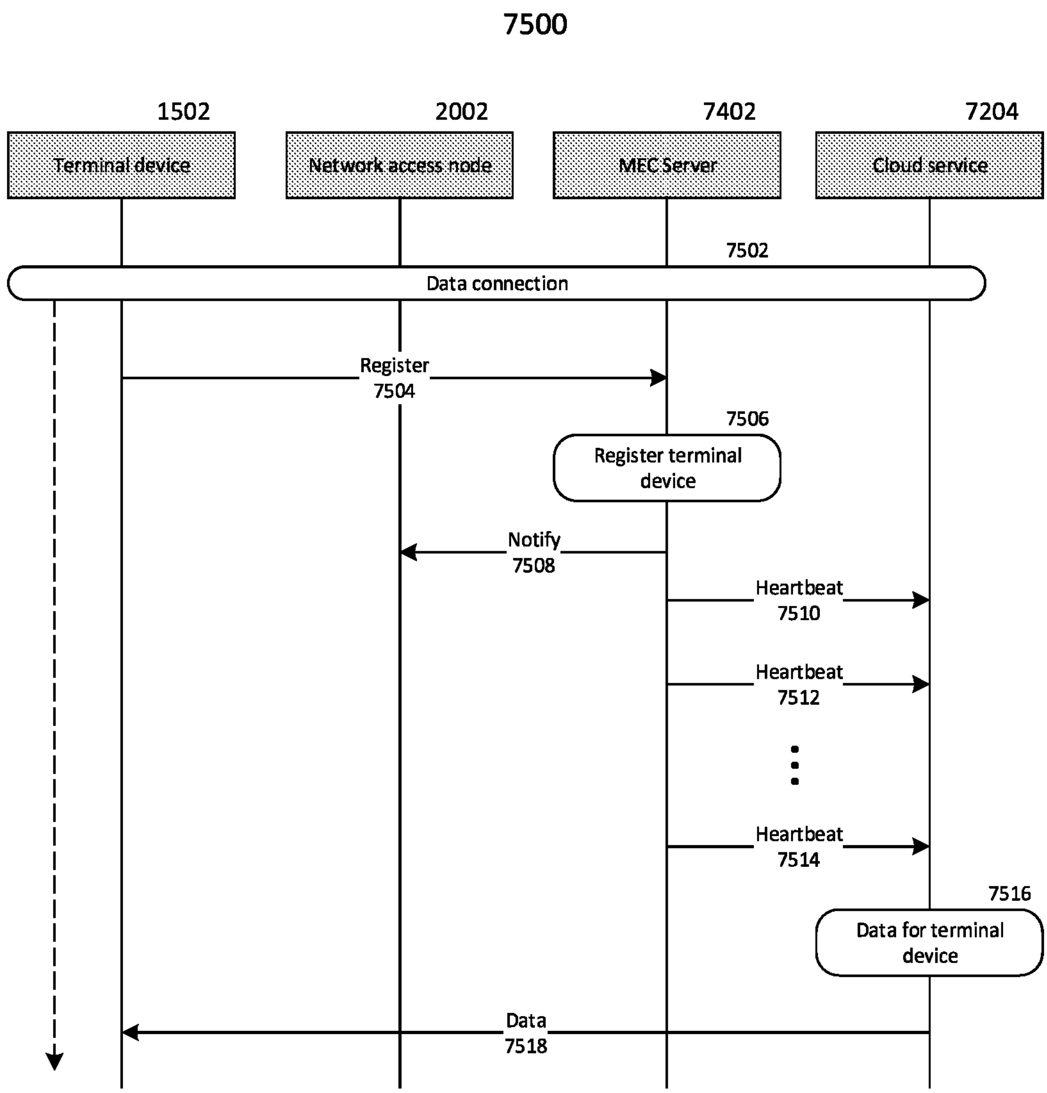
7500
1502
2002
7402
7204
Terminal device
Network access node
MEC Server
Cloud service
7502
Data connection
Register
7504
7506
Register terminal device
Notify
7508
Heartbeat
7510
Heartbeat
7512
Heartbeat
7514
7516
Data for terminal device
Data
7518

FIG 76

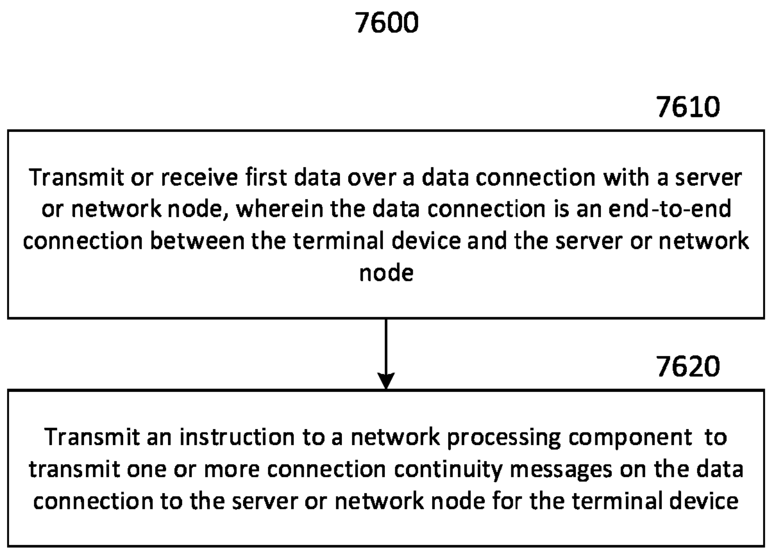
7600
7610
Transmit or receive first data over a data connection with a server or network node, wherein the data connection is an end-to-end connection between the terminal device and the server or network node
7620
Transmit an instruction to a network processing component to transmit one or more connection continuity messages on the data connection to the server or network node for the terminal device

FIG 77

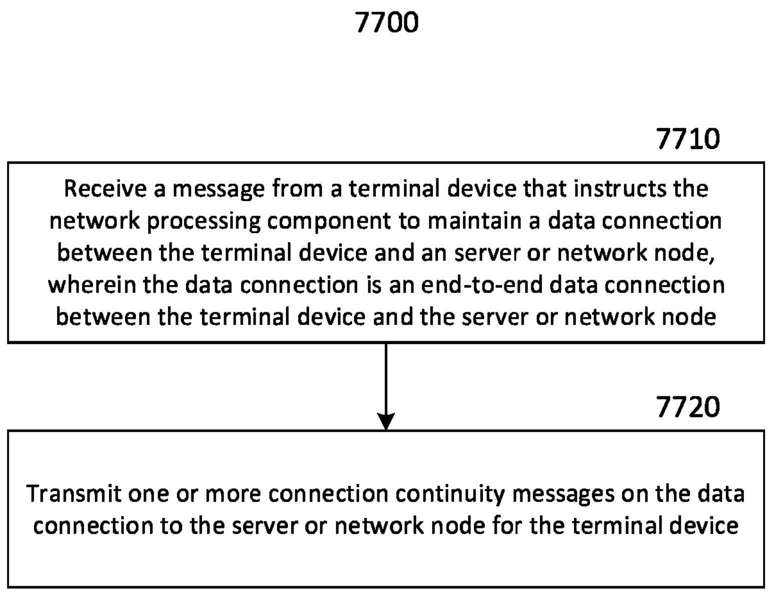
7700
7710
Receive a message from a terminal device that instructs the network processing component to maintain a data connection between the terminal device and an server or network node, wherein the data connection is an end-to-end data connection between the terminal device and the server or network node
7720
Transmit one or more connection continuity messages on the data connection to the server or network node for the terminal device

FIG 78

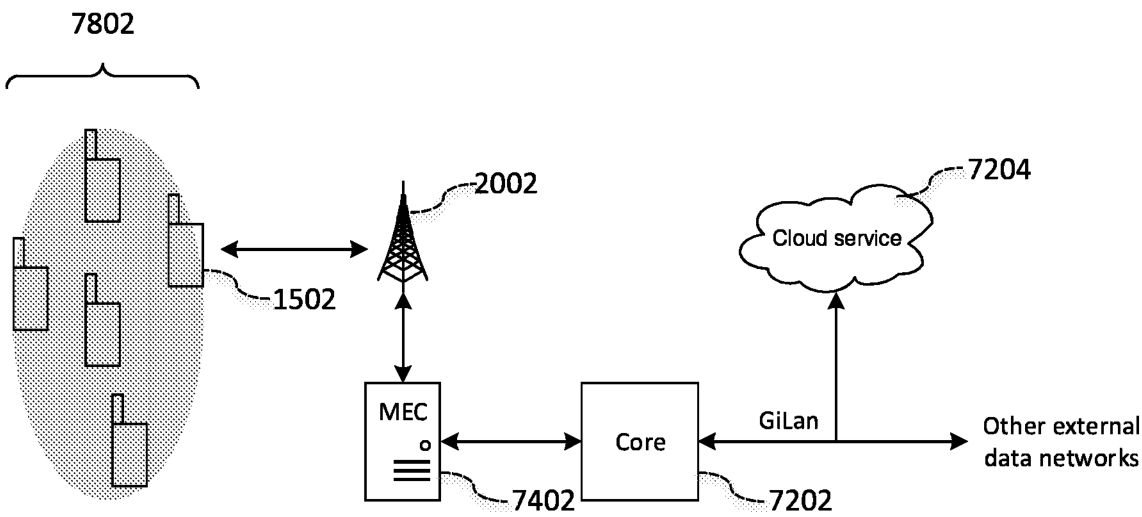
7802
2002
1502
7204
Cloud service
MEC
Core
GiLan
Other external
data networks
7402
7202

FIG 79

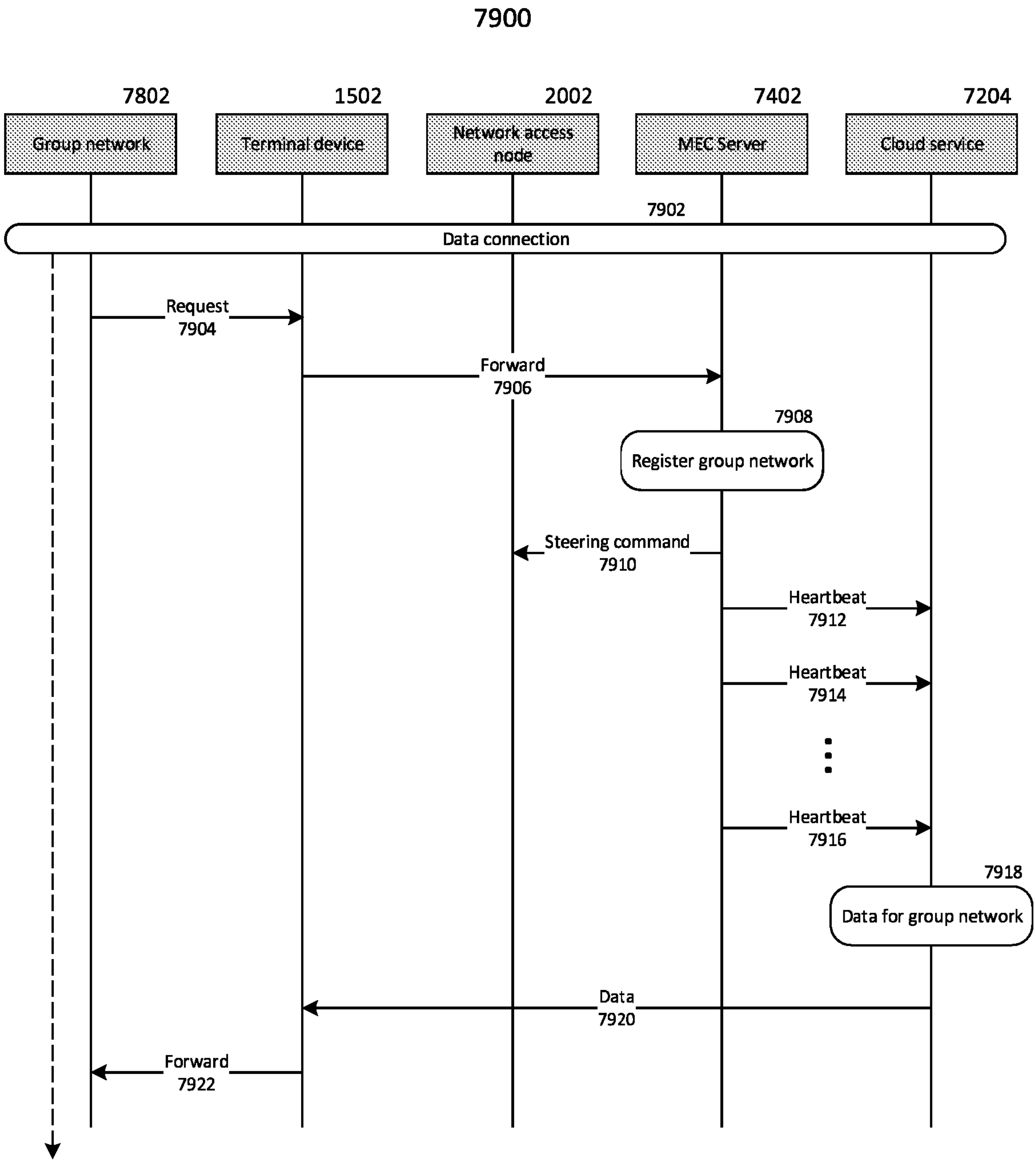
7900
7802
1502
2002
7402
7204
Group network
Terminal device
Network access node
MEC Server
Cloud service
7902
Data connection
Request
7904
Forward
7906
7908
Register group network
Steering command
7910
Heartbeat
7912
Heartbeat
7914
Heartbeat
7916
7918
Data for group network
Data
7920
Forward
7922

FIG 80

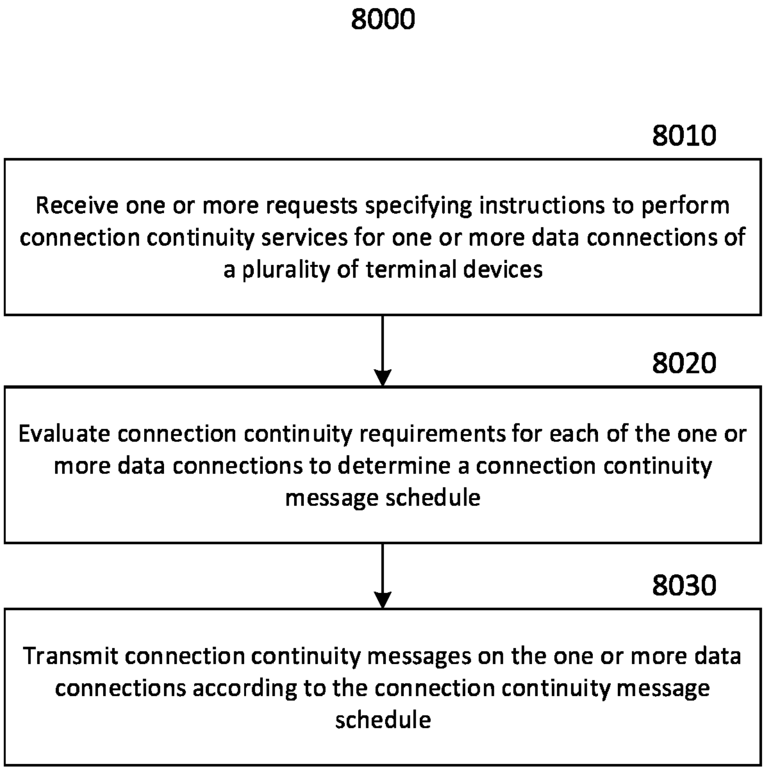
8000
8010
Receive one or more requests specifying instructions to perform connection continuity services for one or more data connections of a plurality of terminal devices
8020
Evaluate connection continuity requirements for each of the one or more data connections to determine a connection continuity message schedule
8030
Transmit connection continuity messages on the one or more data connections according to the connection continuity message schedule

FIG 81

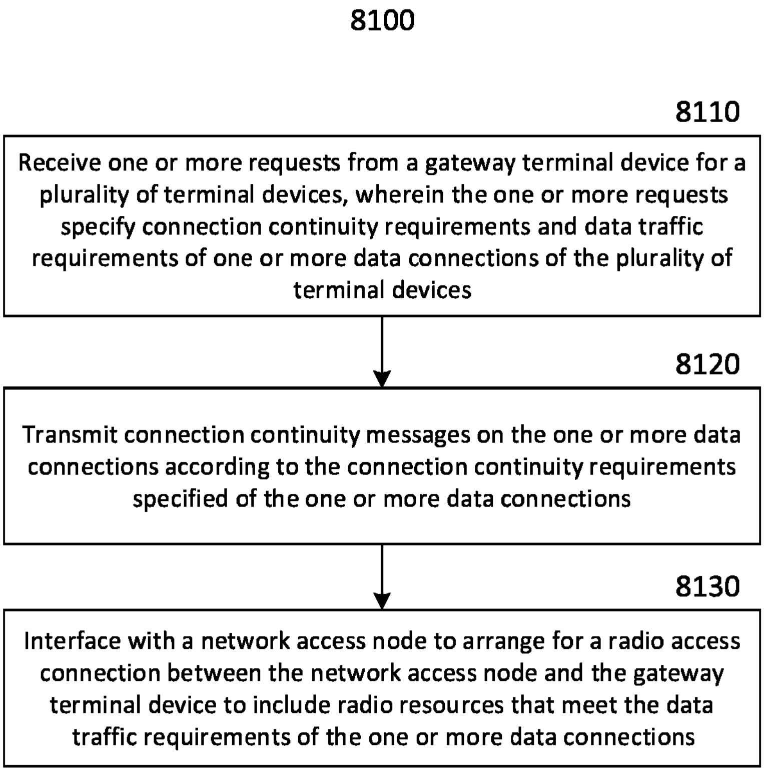
8100
8110
Receive one or more requests from a gateway terminal device for a plurality of terminal devices, wherein the one or more requests specify connection continuity requirements and data traffic requirements of one or more data connections of the plurality of terminal devices
8120
Transmit connection continuity messages on the one or more data connections according to the connection continuity requirements specified of the one or more data connections
8130
Interface with a network access node to arrange for a radio access connection between the network access node and the gateway terminal device to include radio resources that meet the data traffic requirements of the one or more data connections

FIG 82

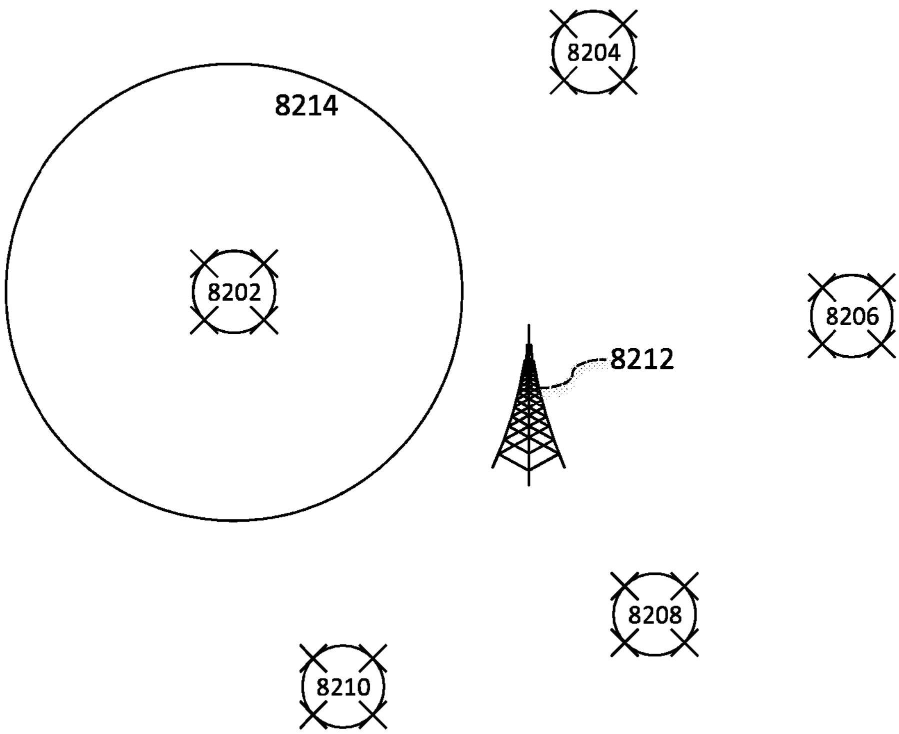

FIG 83

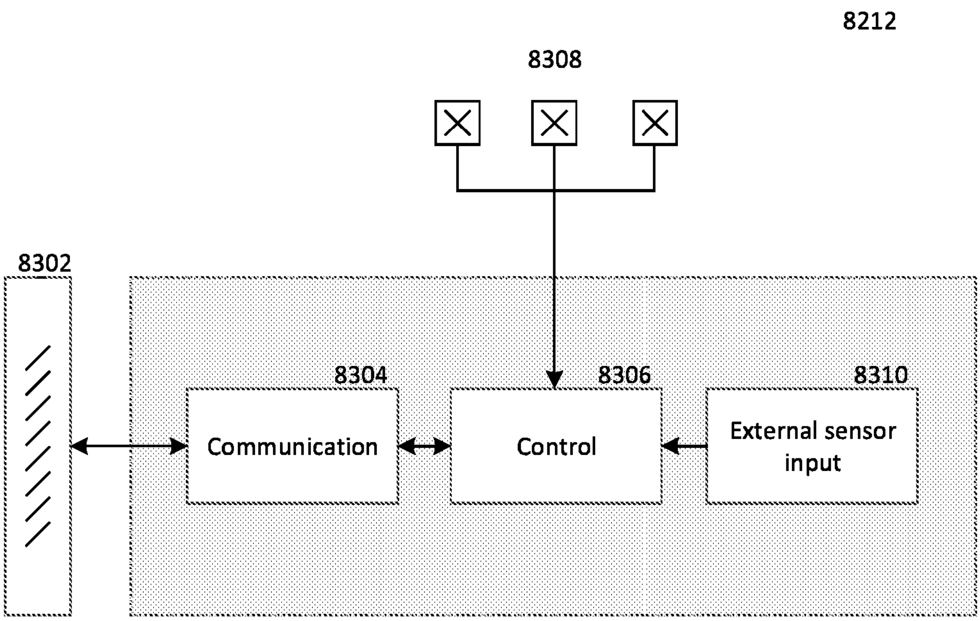
8212
8308
8302
8304
Communication
8306
Control
8310
External sensor input

FIG 84

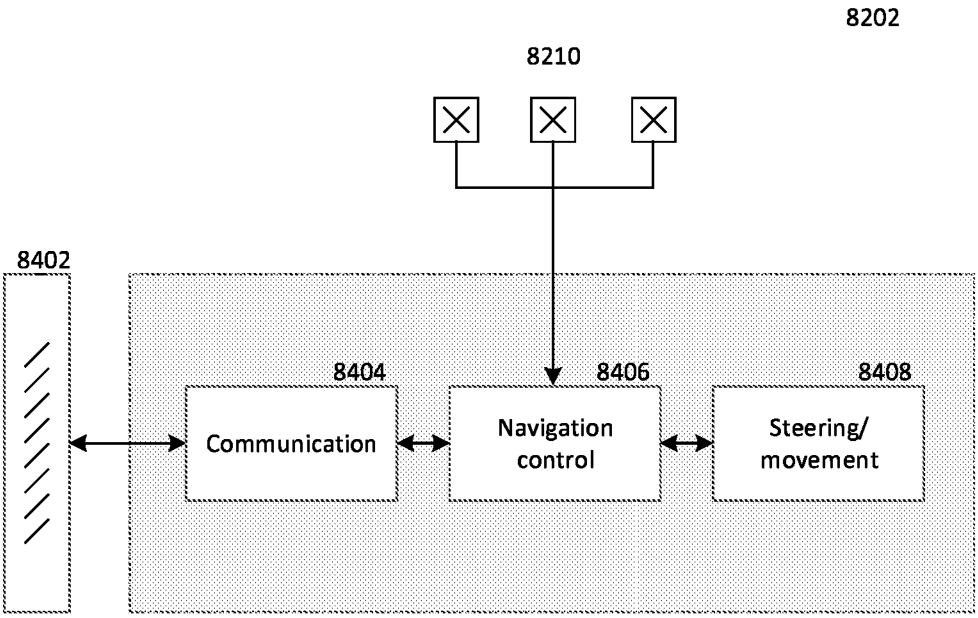
8202
8210
8402
8404
8406
8408
Communication
Navigation control
Steering/ movement

FIG 85

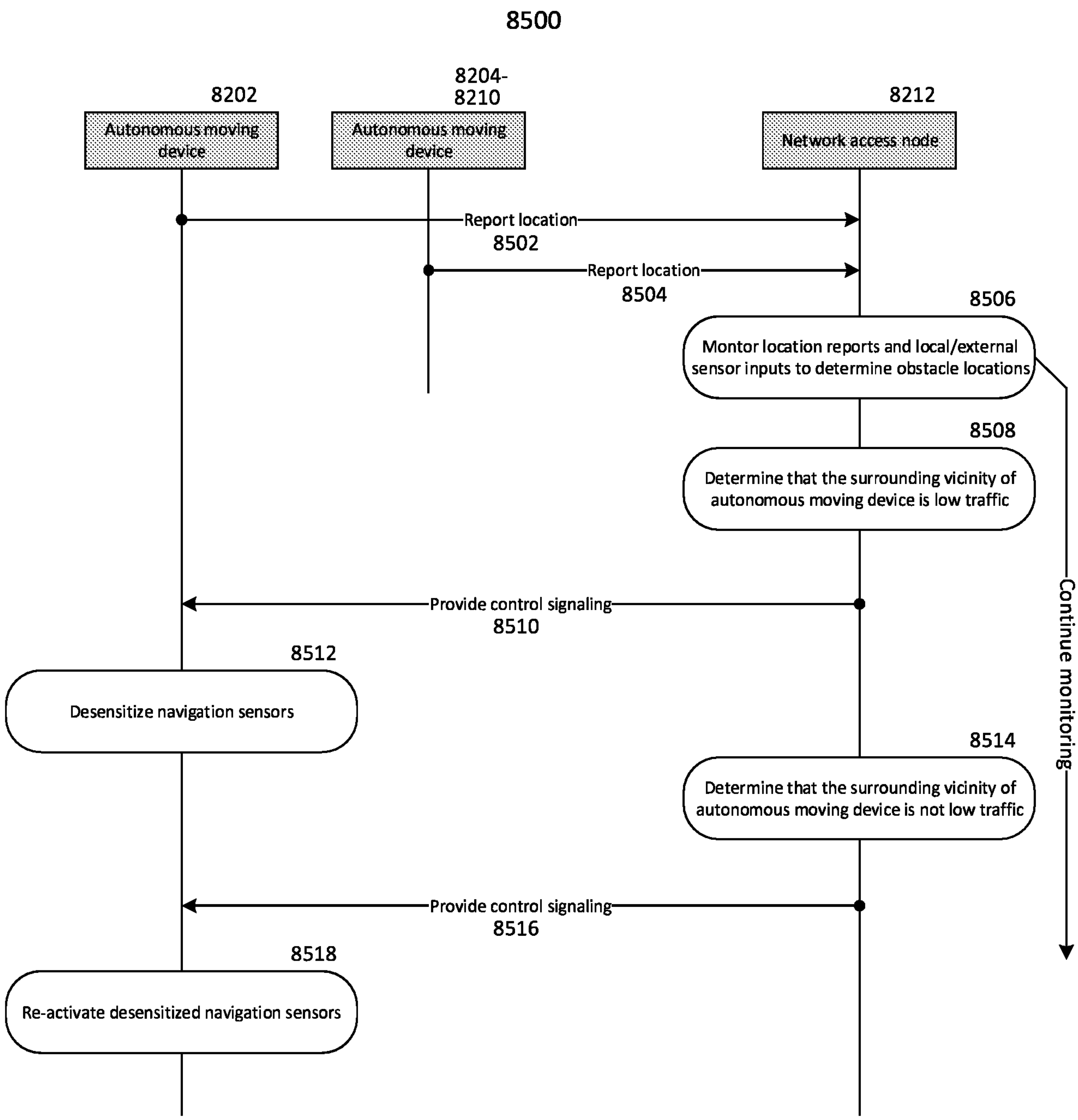
8500
8202
Autonomous moving device
8204-8210
Autonomous moving device
8212
Network access node
Report location
8502
Report location
8504
8506
Montor location reports and local/external sensor inputs to determine obstacle locations
8508
Determine that the surrounding vicinity of autonomous moving device is low traffic
Provide control signaling
8510
8512
Desensitize navigation sensors
8514
Determine that the surrounding vicinity of autonomous moving device is not low traffic
Continue monitoring
Provide control signaling
8516
8518
Re-activate desensitized navigation sensors

FIG 86

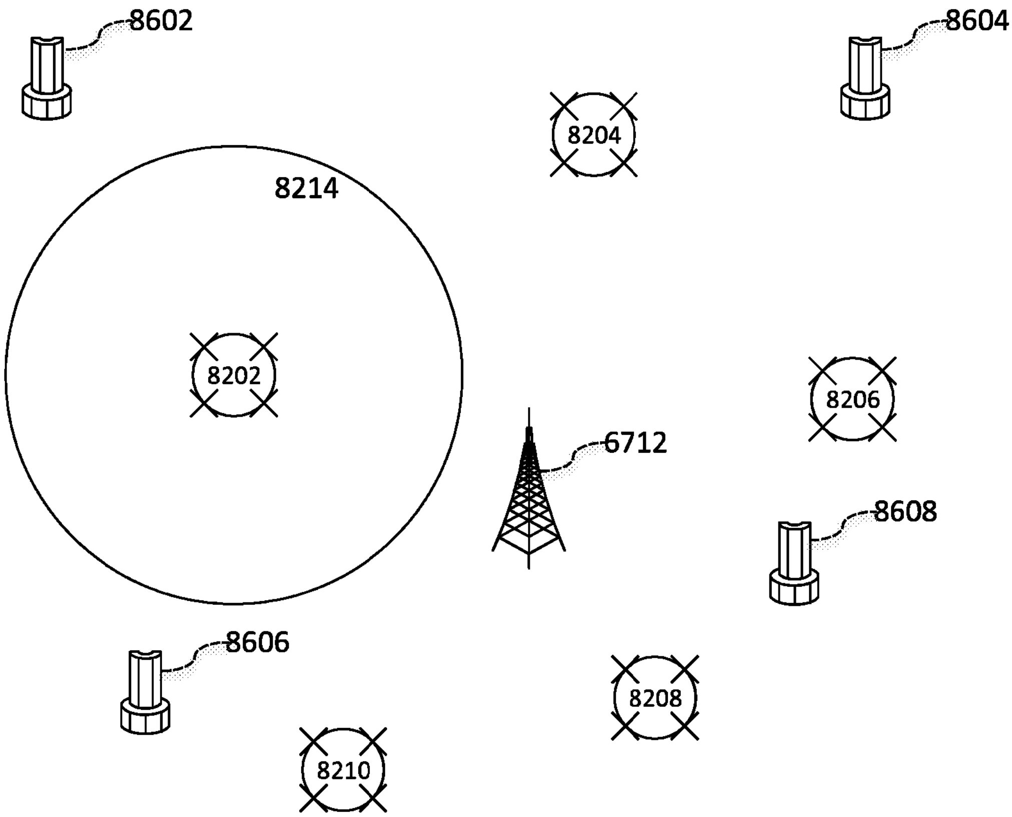

FIG 87

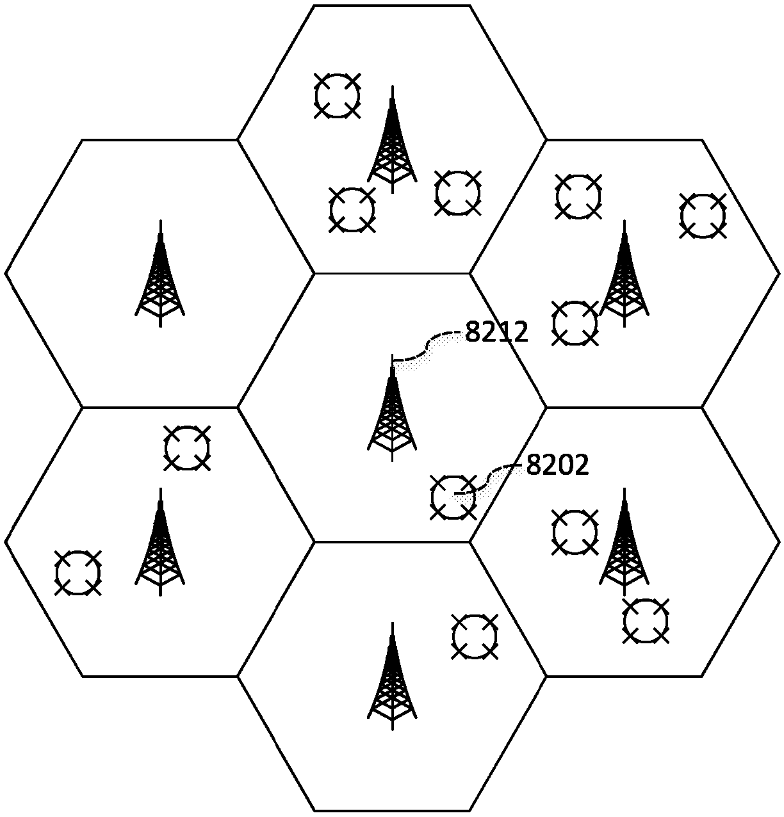

FIG 88

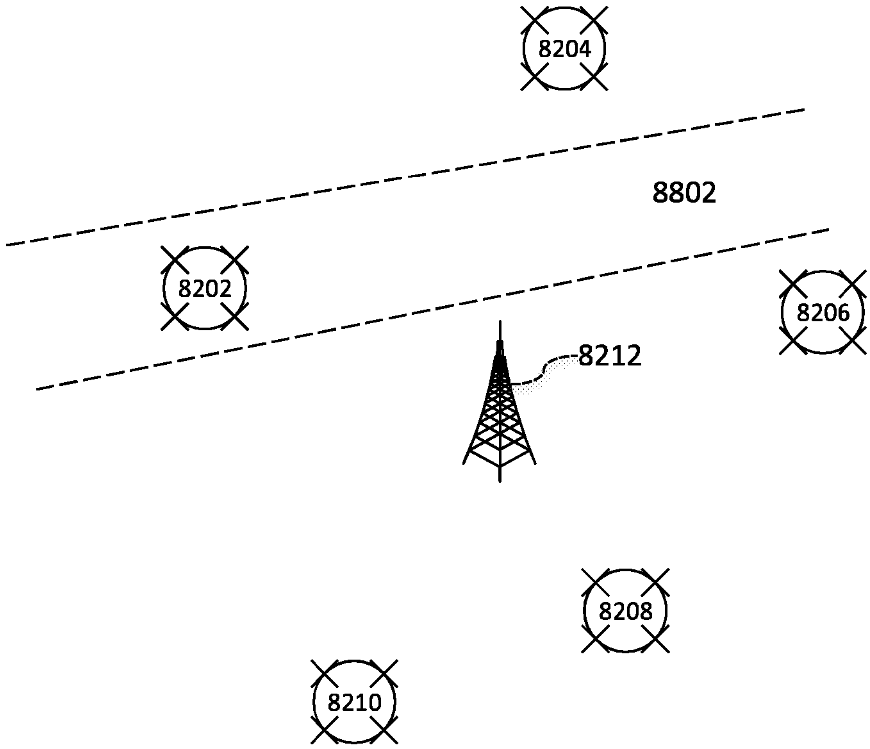

FIG 89

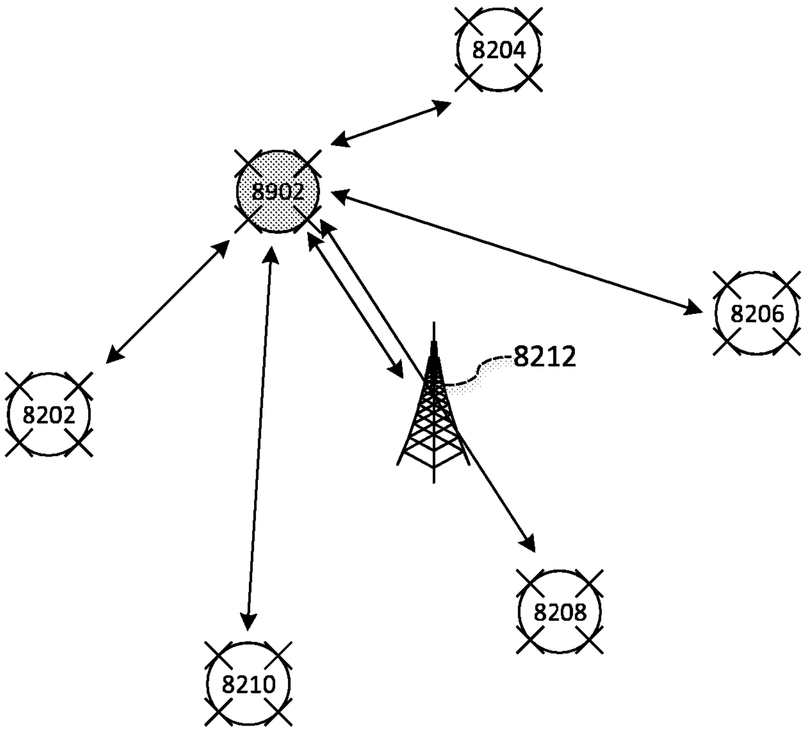

FIG 90

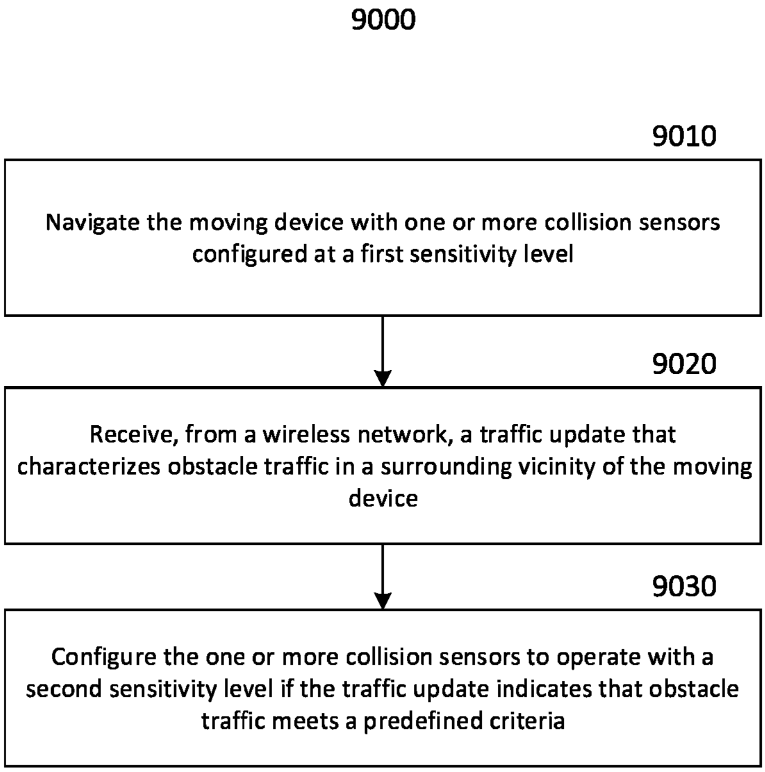
9000
9010
Navigate the moving device with one or more collision sensors configured at a first sensitivity level
9020
Receive, from a wireless network, a traffic update that characterizes obstacle traffic in a surrounding vicinity of the moving device
9030
Configure the one or more collision sensors to operate with a second sensitivity level if the traffic update indicates that obstacle traffic meets a predefined criteria

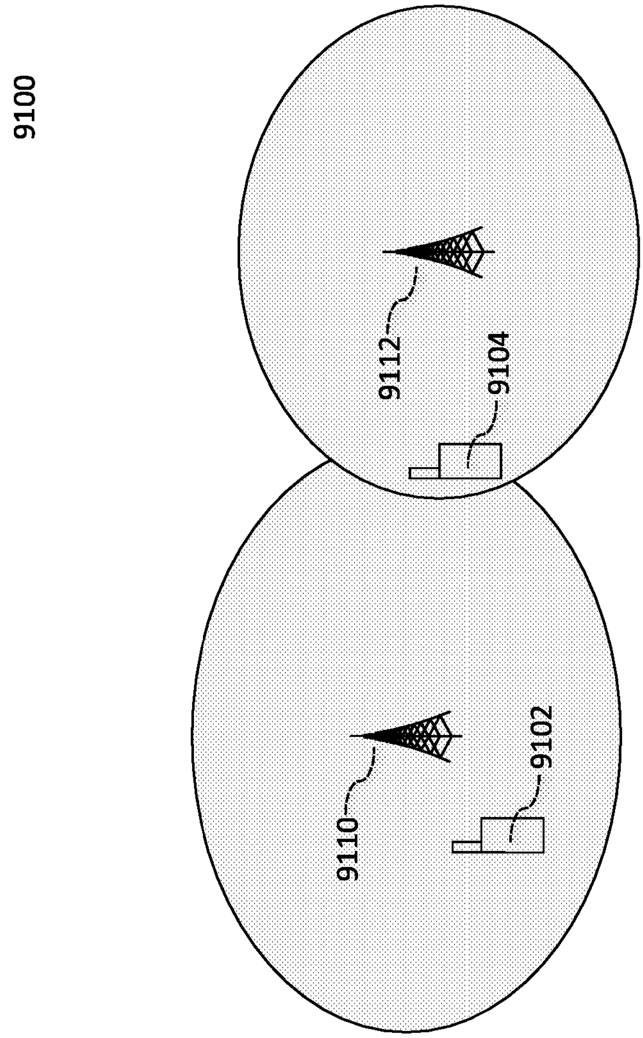


FIG 91

FIG 92

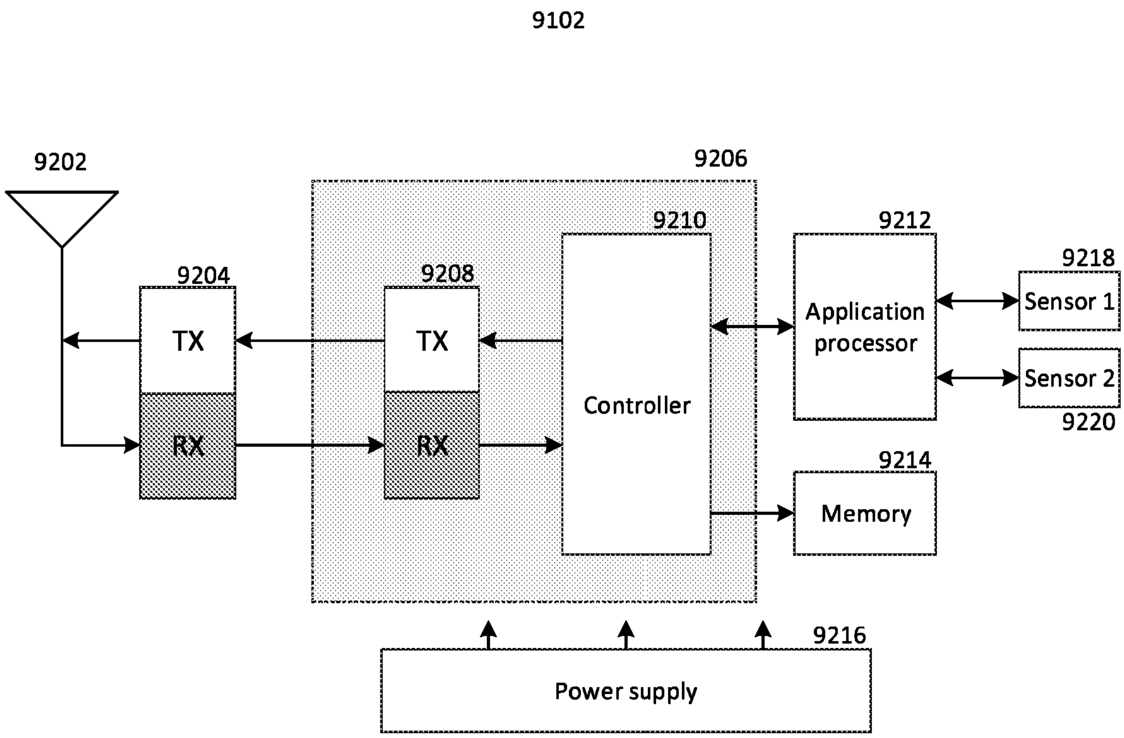
9102
9202
9204
TX
RX
9206
9208
TX
RX
9210
Controller
9212
Application processor
9218
Sensor 1
Sensor 2
9220
9214
Memory
9216
Power supply

FIG 93

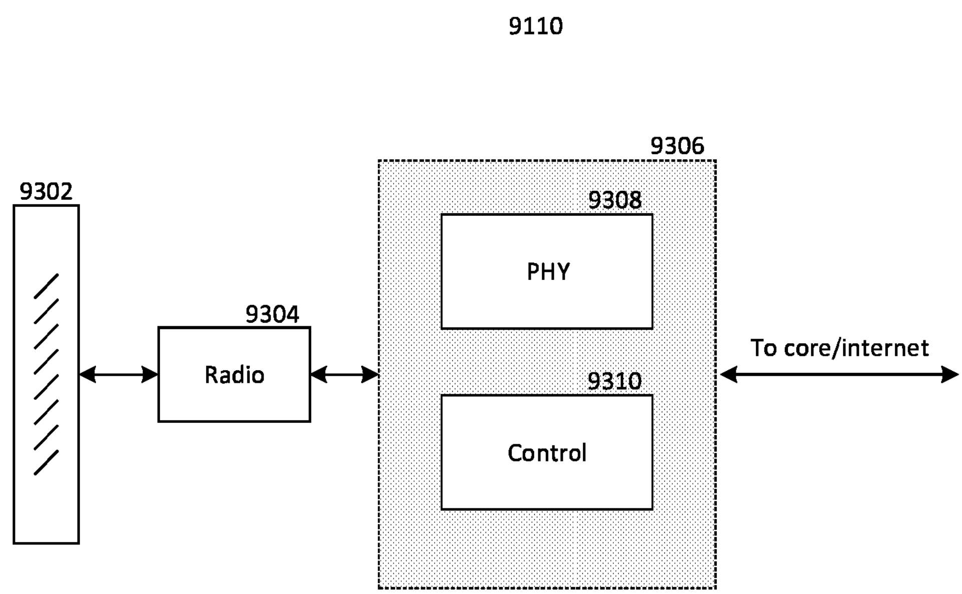
9110
9306
9302
9308
PHY
9304
Radio
To core/internet
9310
Control

FIG 94

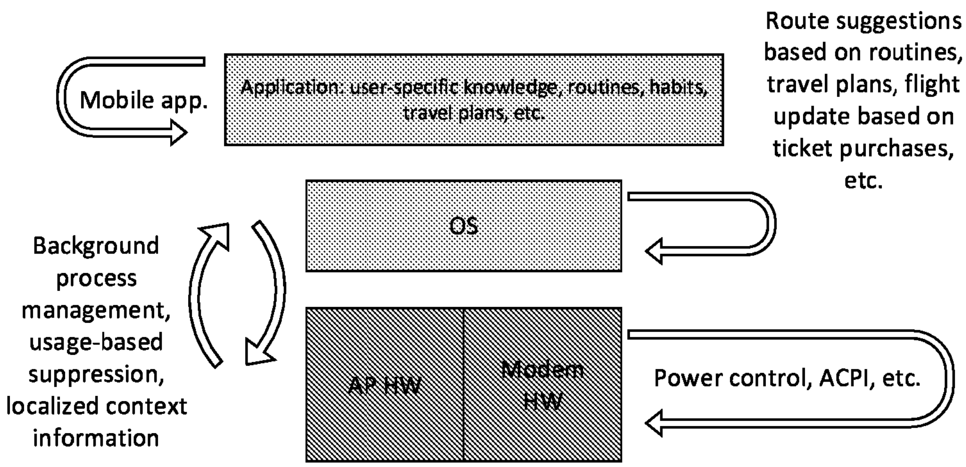
Mobile app.
Application: user-specific knowledge, routines, habits, travel plans, etc.
Route suggestions based on routines, travel plans, flight update based on ticket purchases, etc.
OS
Background process management, usage-based suppression, localized context information
AP HW
Modem HW
Power control, ACPI, etc.

FIG 95

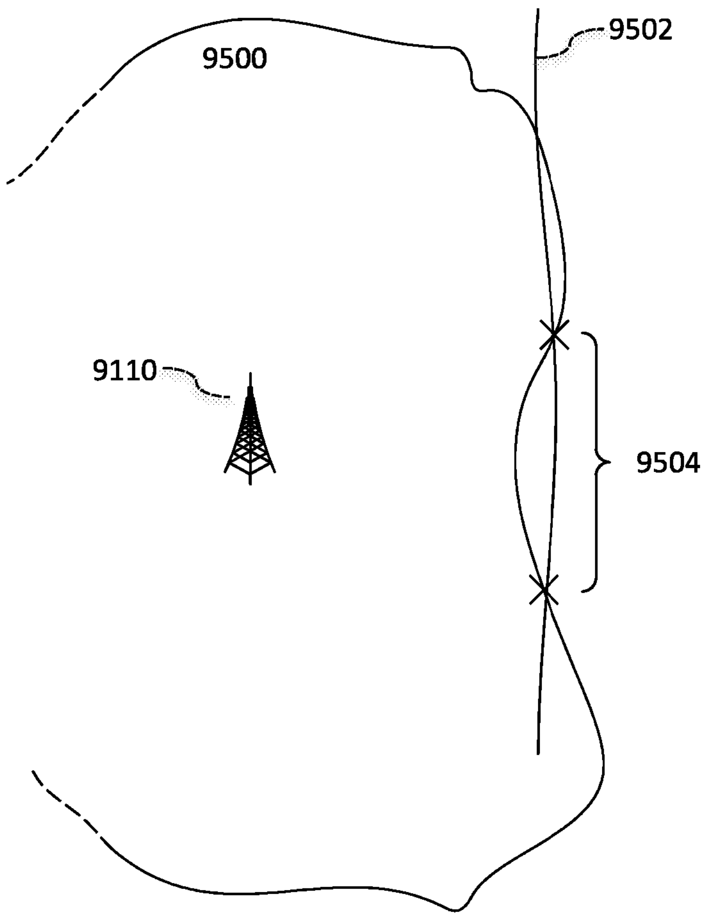

FIG 96

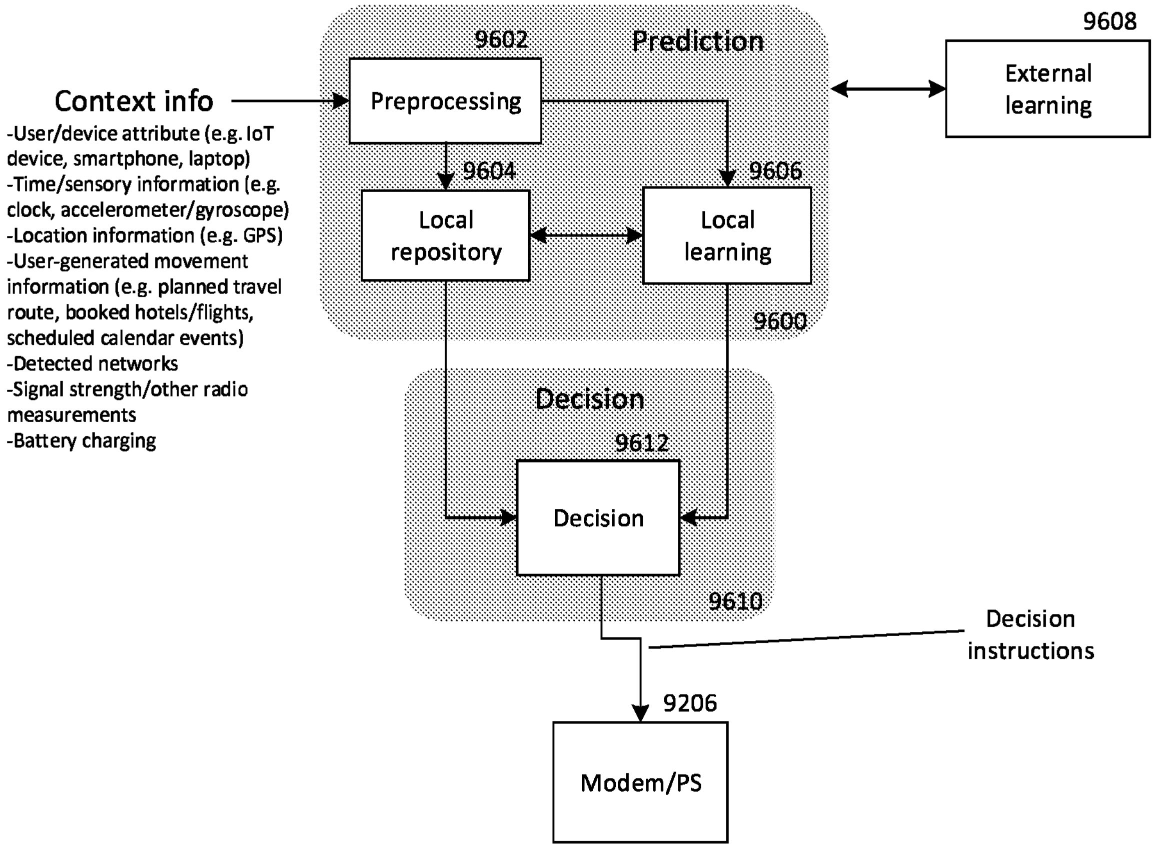
Context info
-User/device attribute (e.g. IoT device, smartphone, laptop)
-Time/sensory information (e.g. clock, accelerometer/gyroscope)
-Location information (e.g. GPS)
-User-generated movement information (e.g. planned travel route, booked hotels/flights, scheduled calendar events)
-Detected networks
-Signal strength/other radio measurements
-Battery charging
Prediction
9602
Preprocessing
9604
Local repository
9606
Local learning
9600
9608
External learning
Decision
9612
Decision
9610
Decision instructions
9206
Modem/PS

FIG 97

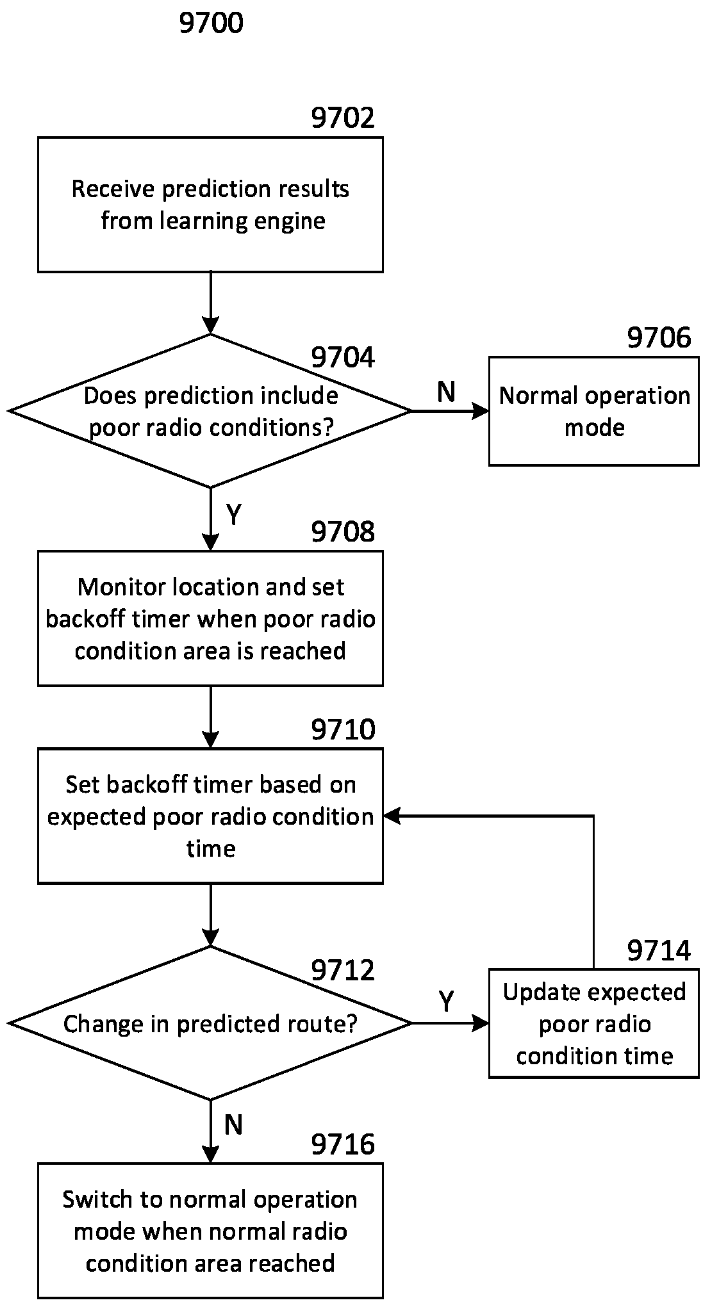
9700
9702
Receive prediction results from learning engine
9704
Does prediction include poor radio conditions?
N
9706
Normal operation mode
Y
9708
Monitor location and set backoff timer when poor radio condition area is reached
9710
Set backoff timer based on expected poor radio condition time
9712
Change in predicted route?
Y
9714
Update expected poor radio condition time
N
9716
Switch to normal operation mode when normal radio condition area reached

FIG 98

9800
9810
9820
9830

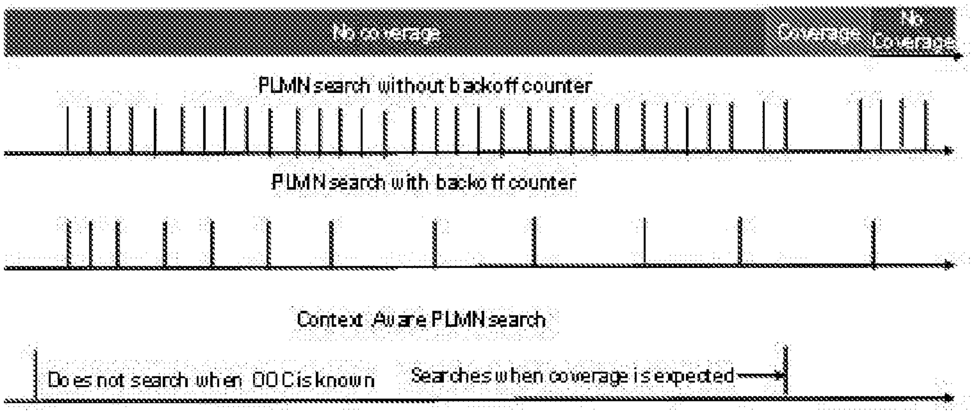

FIG 99

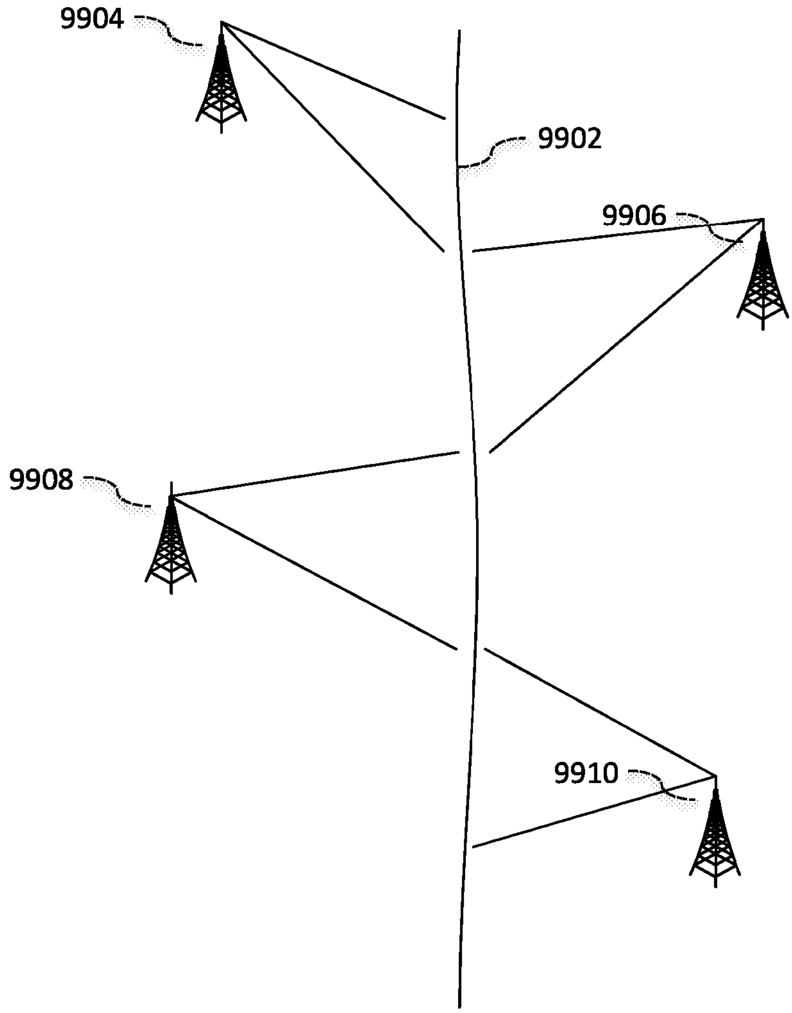

FIG 100

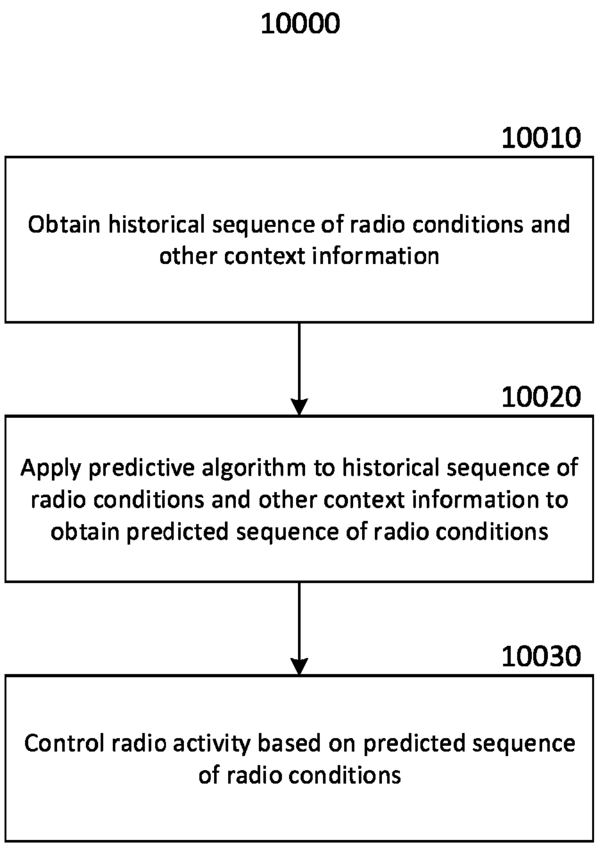
10000
10010
Obtain historical sequence of radio conditions and other context information
10020
Apply predictive algorithm to historical sequence of radio conditions and other context information to obtain predicted sequence of radio conditions
10030
Control radio activity based on predicted sequence of radio conditions

FIG 101

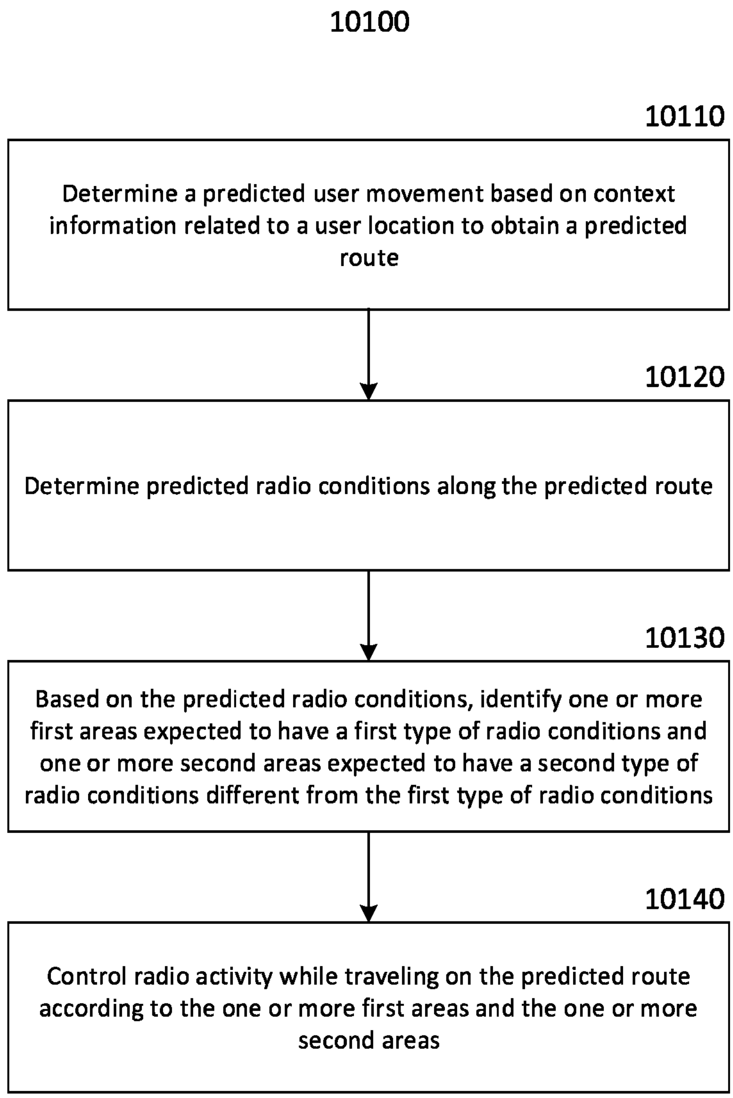
10100
10110
Determine a predicted user movement based on context information related to a user location to obtain a predicted route
10120
Determine predicted radio conditions along the predicted route
10130
Based on the predicted radio conditions, identify one or more first areas expected to have a first type of radio conditions and one or more second areas expected to have a second type of radio conditions different from the first type of radio conditions
10140
Control radio activity while traveling on the predicted route according to the one or more first areas and the one or more second areas

FIG 102

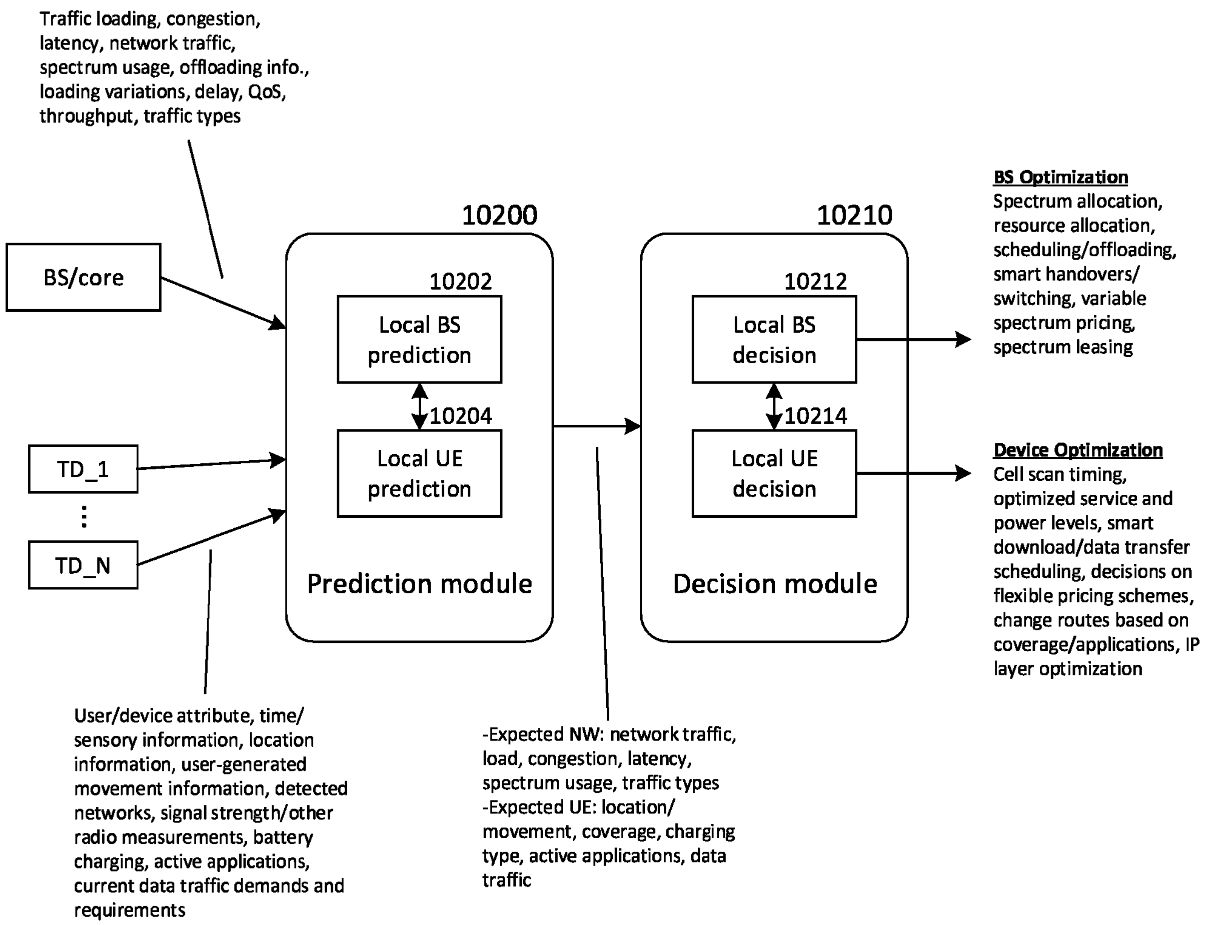
Traffic loading, congestion, latency, network traffic, spectrum usage, offloading info., loading variations, delay, QoS, throughput, traffic types
BS/core
TD_1
TD_N
10200
10202
Local BS prediction
10204
Local UE prediction
Prediction module
10210
10212
Local BS decision
10214
Local UE decision
Decision module
BS Optimization
Spectrum allocation, resource allocation, scheduling/offloading, smart handovers/ switching, variable spectrum pricing, spectrum leasing
Device Optimization
Cell scan timing, optimized service and power levels, smart download/data transfer scheduling, decisions on flexible pricing schemes, change routes based on coverage/applications, IP layer optimization
User/device attribute, time/ sensory information, location information, user-generated movement information, detected networks, signal strength/other radio measurements, battery charging, active applications, current data traffic demands and requirements
-Expected NW: network traffic, load, congestion, latency, spectrum usage, traffic types
-Expected UE: location/ movement, coverage, charging type, active applications, data traffic

FIG 103

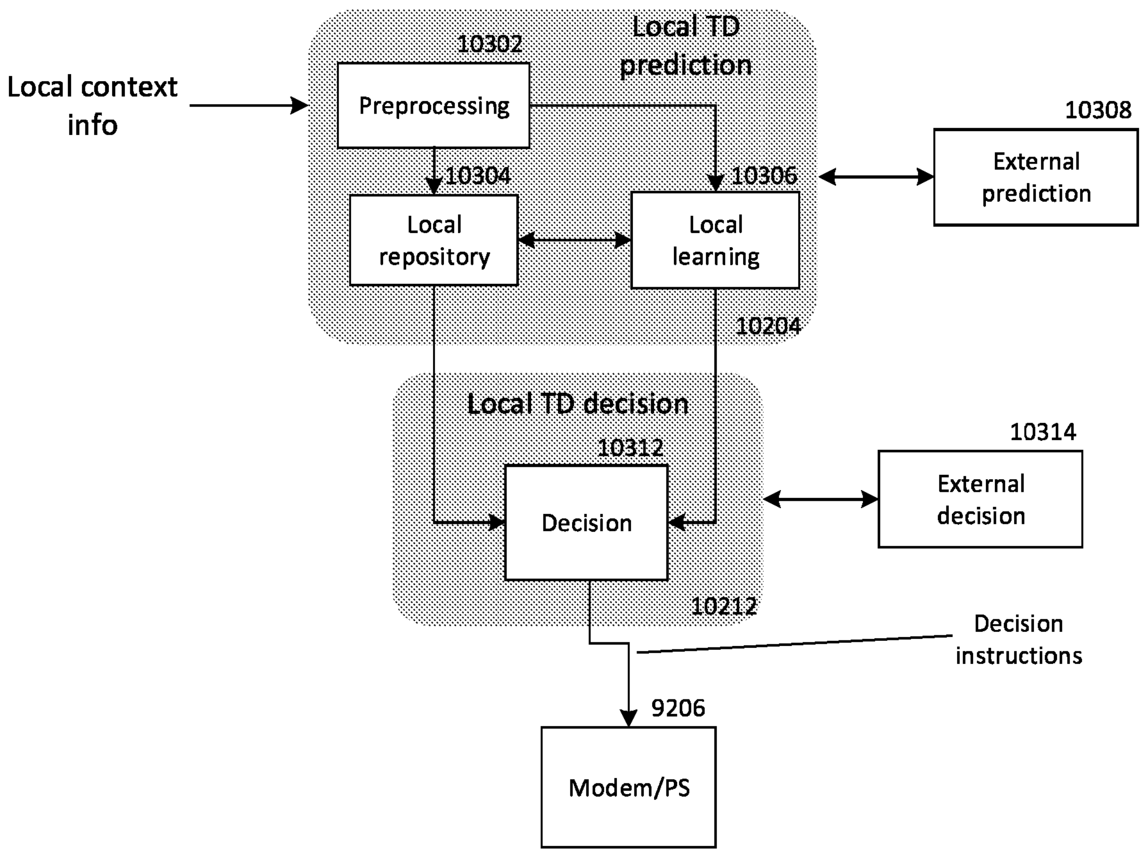
Local context info
Local TD prediction
10302
Preprocessing
10304
Local repository
10306
Local learning
10204
10308
External prediction
Local TD decision
10312
Decision
10212
10314
External decision
Decision instructions
9206
Modem/PS

FIG 104

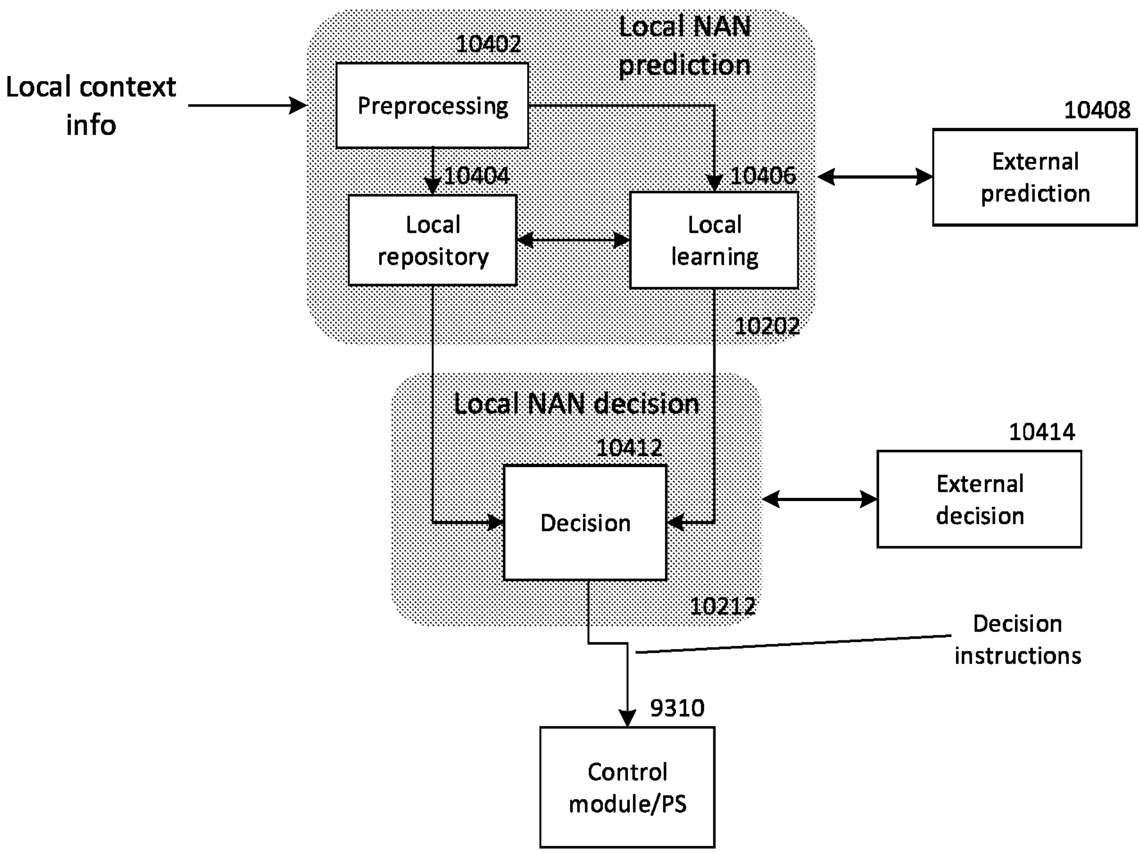
Local context info
Local NAN prediction
10402
Preprocessing
10404
Local repository
10406
Local learning
10202
10408
External prediction
Local NAN decision
10412
Decision
10212
10414
External decision
Decision instructions
9310
Control module/PS

FIG 105

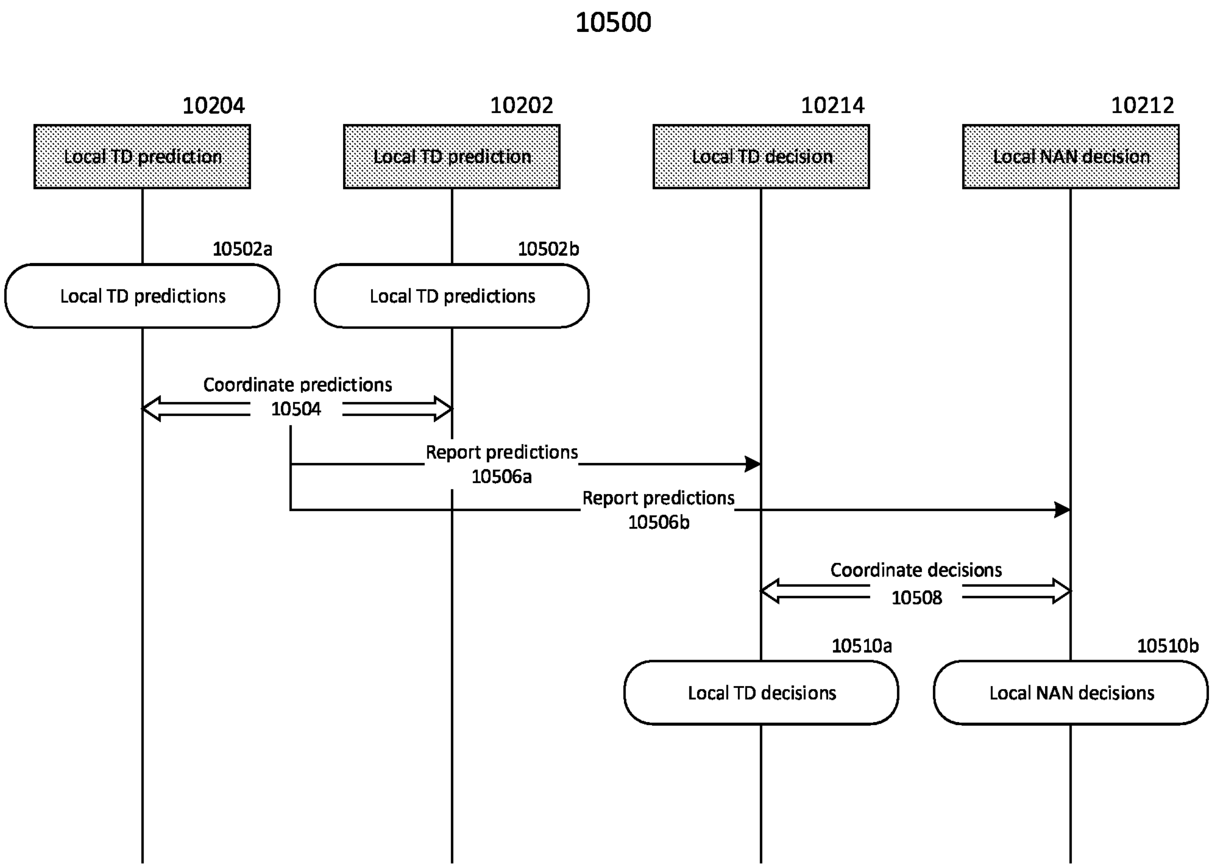
10500
10204
Local TD prediction
10202
Local TD prediction
10214
Local TD decision
10212
Local NAN decision
10502a
Local TD predictions
10502b
Local TD predictions
Coordinate predictions
10504
Report predictions
10506a
Report predictions
10506b
Coordinate decisions
10508
10510a
Local TD decisions
10510b
Local NAN decisions

FIG 106

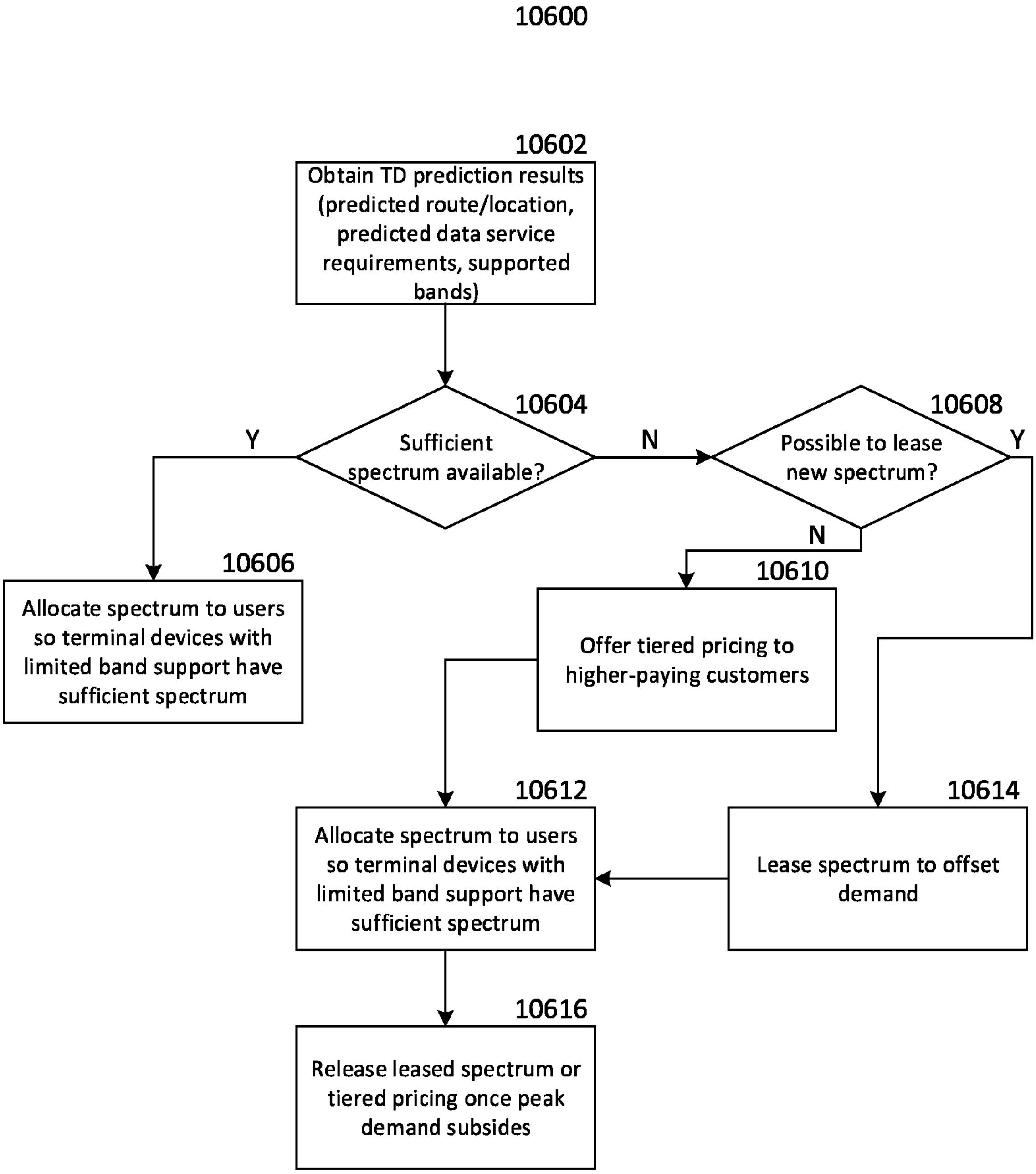
10600
10602
Obtain TD prediction results (predicted route/location, predicted data service requirements, supported bands)
10604
Sufficient spectrum available?
Y
N
10608
Possible to lease new spectrum?
Y
N
10606
Allocate spectrum to users so terminal devices with limited band support have sufficient spectrum
10610
Offer tiered pricing to higher-paying customers
10612
Allocate spectrum to users so terminal devices with limited band support have sufficient spectrum
10614
Lease spectrum to offset demand
10616
Release leased spectrum or tiered pricing once peak demand subsides

FIG 107

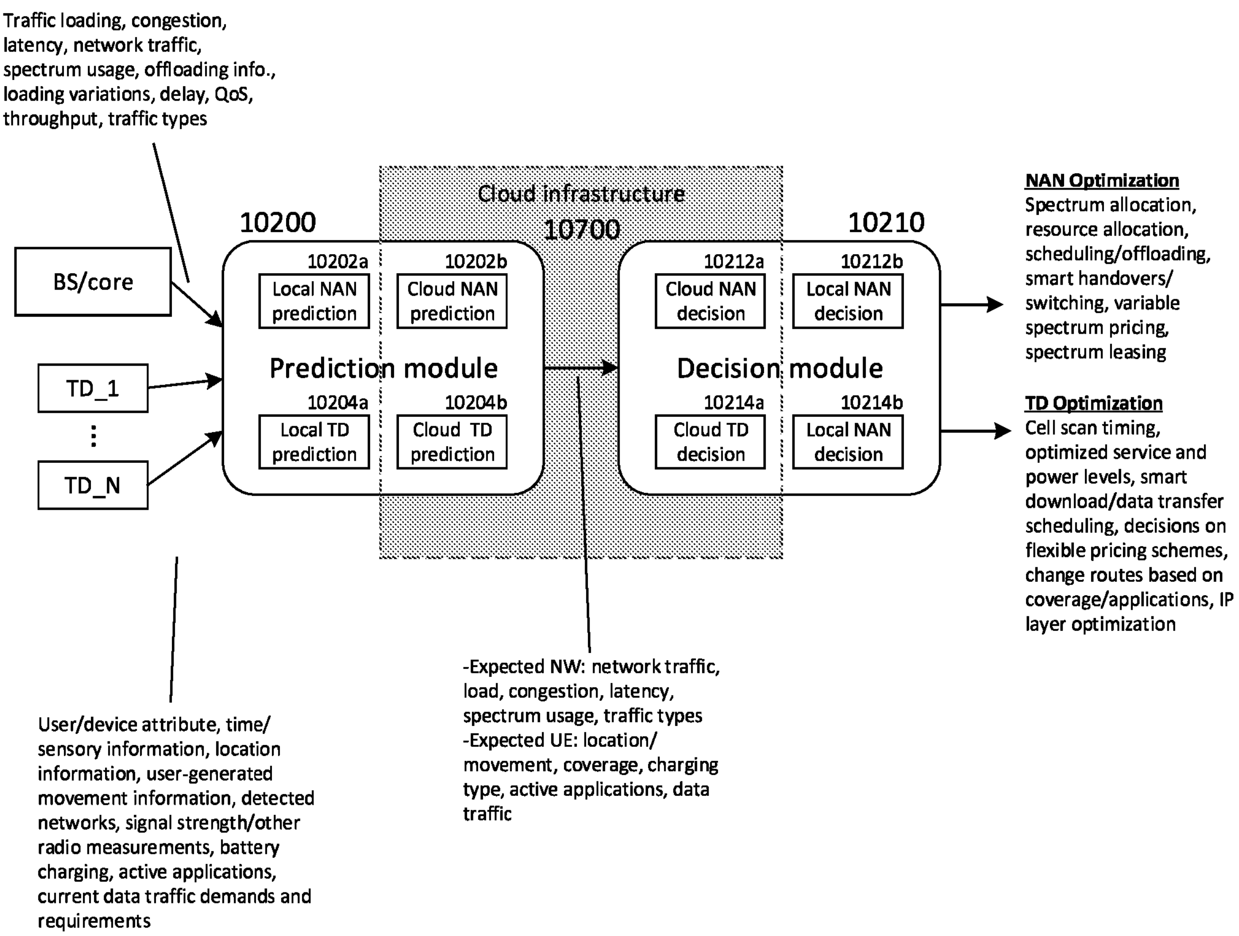
Traffic loading, congestion, latency, network traffic, spectrum usage, offloading info., loading variations, delay, QoS, throughput, traffic types
Cloud infrastructure
10700
10200
10210
BS/core
TD_1
TD_N
10202a
Local NAN prediction
10202b
Cloud NAN prediction
Prediction module
10204a
Local TD prediction
10204b
Cloud TD prediction
10212a
Cloud NAN decision
10212b
Local NAN decision
Decision module
10214a
Cloud TD decision
10214b
Local NAN decision
NAN Optimization
Spectrum allocation, resource allocation, scheduling/offloading, smart handovers/ switching, variable spectrum pricing, spectrum leasing
TD Optimization
Cell scan timing, optimized service and power levels, smart download/data transfer scheduling, decisions on flexible pricing schemes, change routes based on coverage/applications, IP layer optimization
User/device attribute, time/ sensory information, location information, user-generated movement information, detected networks, signal strength/other radio measurements, battery charging, active applications, current data traffic demands and requirements
-Expected NW: network traffic, load, congestion, latency, spectrum usage, traffic types
-Expected UE: location/ movement, coverage, charging type, active applications, data traffic

FIG 108

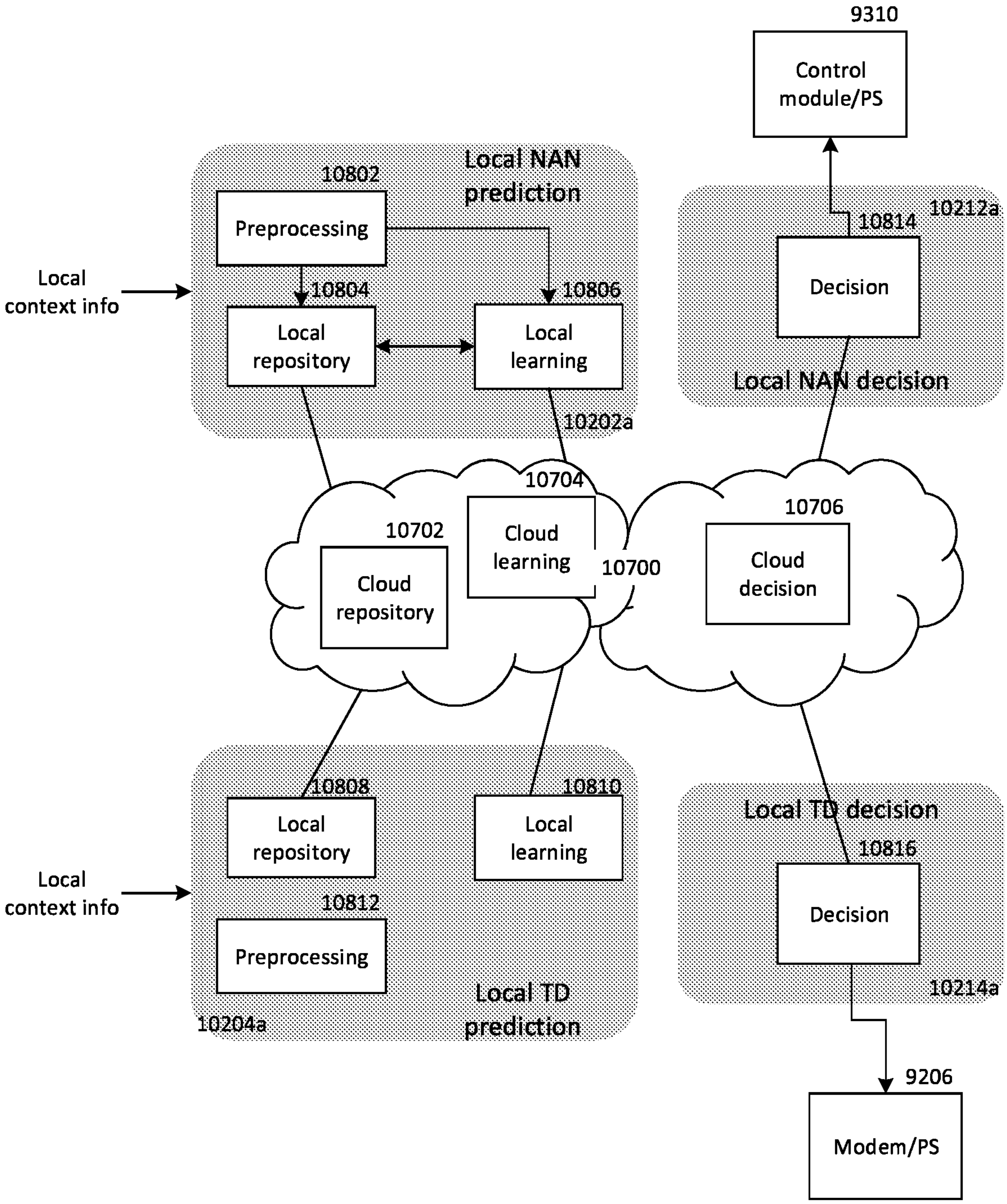
9310
Control module/PS
Local NAN prediction
10802
Preprocessing
Local context info
10804
10806
Local repository
Local learning
10202a
10814
10212a
Decision
Local NAN decision
10704
10702
Cloud learning
10700
10706
Cloud repository
Cloud decision
10808
10810
Local repository
Local learning
Local context info
10812
Preprocessing
10204a
Local TD prediction
Local TD decision
10816
Decision
10214a
9206
Modem/PS

# FIG 109

10902

| | | | | | | |
|---|---|---|---|---|---|---|
| User ID | Msg Type (Data Upload) | Data Type 1 | Data Field values | Data Type 2 | Data Field Values | -------- |

10904

| | | | | | | |
|---|---|---|---|---|---|---|
| User ID | Msg Type (Data Req) | Data Type (BSSID) | Loc values for route | Data Type (RSSI) | BSSIDs | -------- |

10906

| | | | | | | |
|---|---|---|---|---|---|---|
| User ID | Msg Type (Data Response) | Data Type (BSSID) | Loc1 BSSID, Loc2 BSSID ... | Data Type (RSSI) | BSSID1 RSSI, BSSID2 RSSI etc | -------- |

10908

| | | | |
|---|---|---|---|
| User ID | Msg Type (Pred req) | Data Type (route prediction) | Curr Loc, Curr Time |

10910

| | | | |
|---|---|---|---|
| User ID | Msg Type (Pred resp) | Data Type (route prediction) | Time 1 Loc1, Time 2 Loc 2, ... |

FIG 110

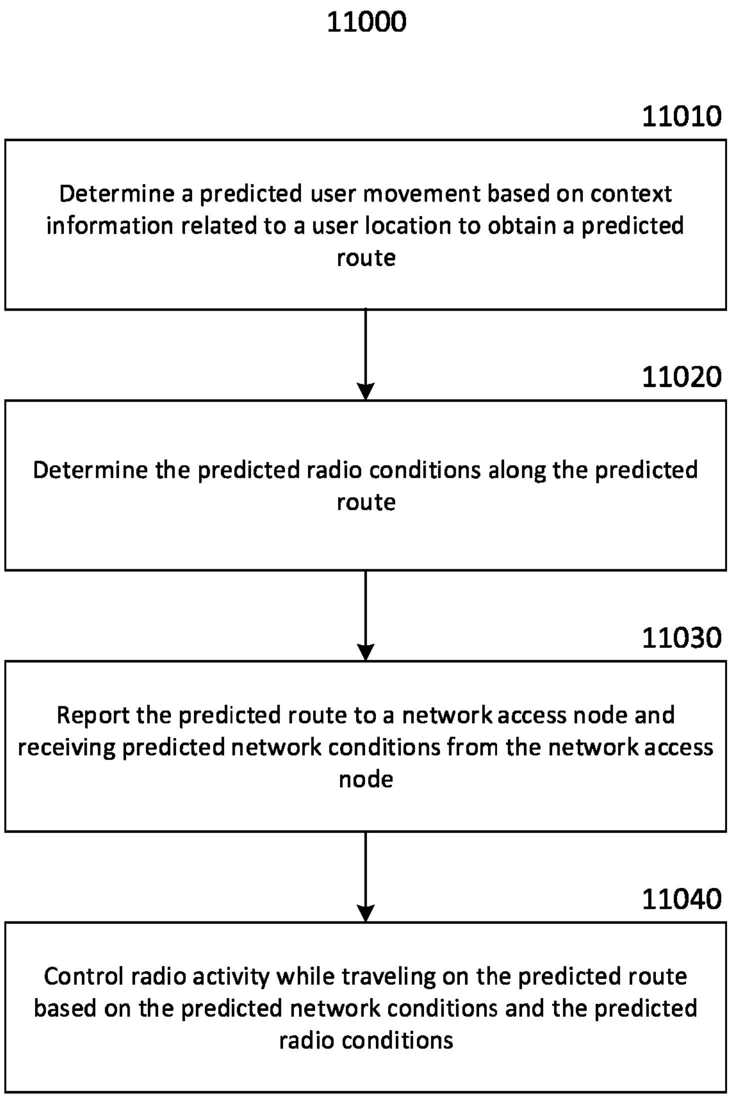
11000
11010
Determine a predicted user movement based on context information related to a user location to obtain a predicted route
11020
Determine the predicted radio conditions along the predicted route
11030
Report the predicted route to a network access node and receiving predicted network conditions from the network access node
11040
Control radio activity while traveling on the predicted route based on the predicted network conditions and the predicted radio conditions

FIG 111

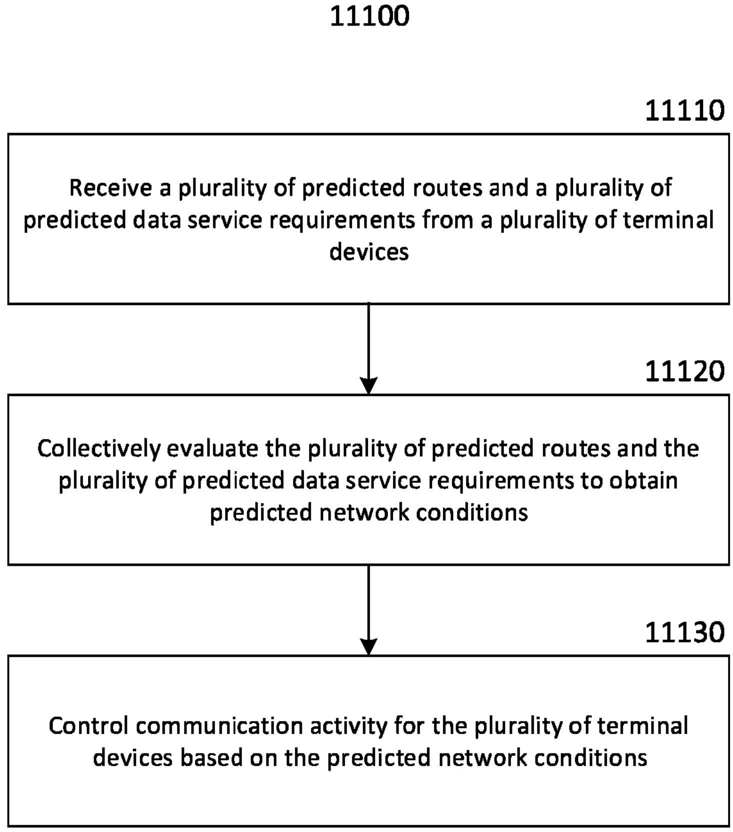
11100
11110
Receive a plurality of predicted routes and a plurality of predicted data service requirements from a plurality of terminal devices
11120
Collectively evaluate the plurality of predicted routes and the plurality of predicted data service requirements to obtain predicted network conditions
11130
Control communication activity for the plurality of terminal devices based on the predicted network conditions

FIG 112

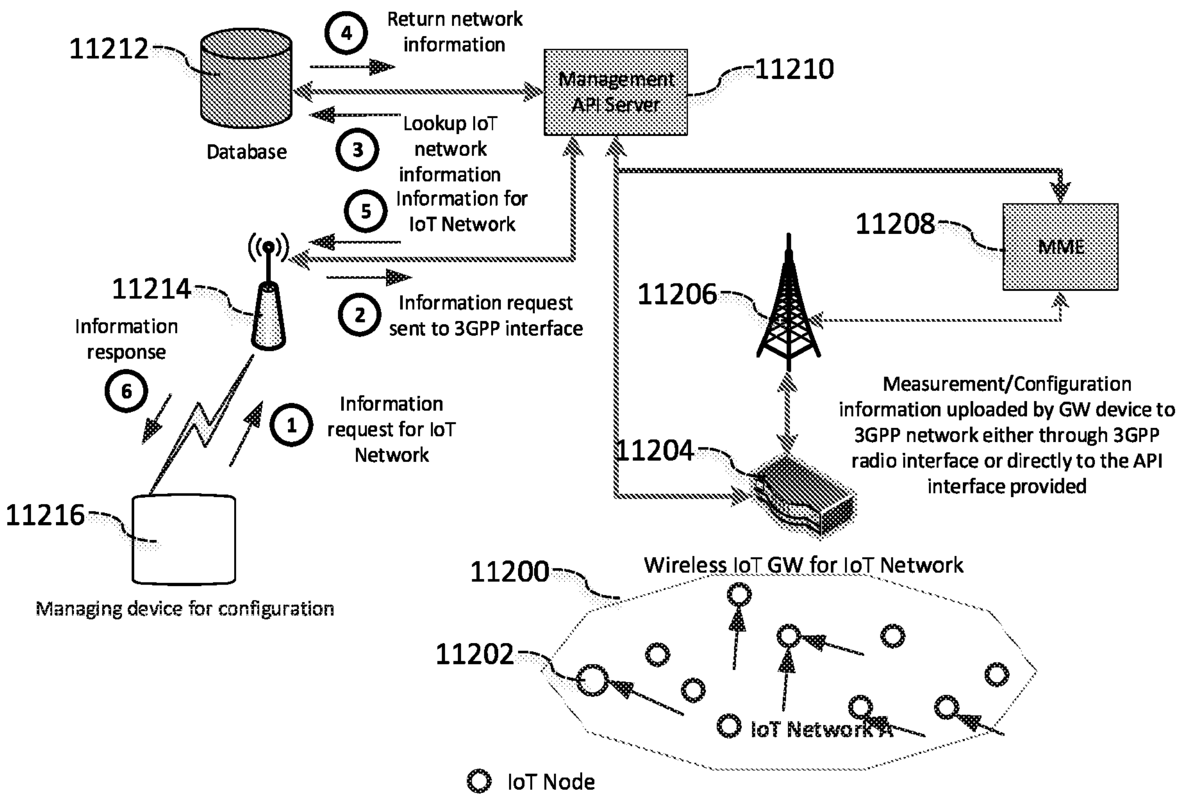
11212
Database
4
Return network information
3
Lookup IoT network information
5
Information for IoT Network
Management API Server
11210
11208
MME
11214
Information response
6
2
Information request sent to 3GPP interface
11206
1
Information request for IoT Network
Measurement/Configuration information uploaded by GW device to 3GPP network either through 3GPP radio interface or directly to the API interface provided
11204
11216
Managing device for configuration
11200
Wireless IoT GW for IoT Network
11202
IoT Network A
IoT Node

FIG 113

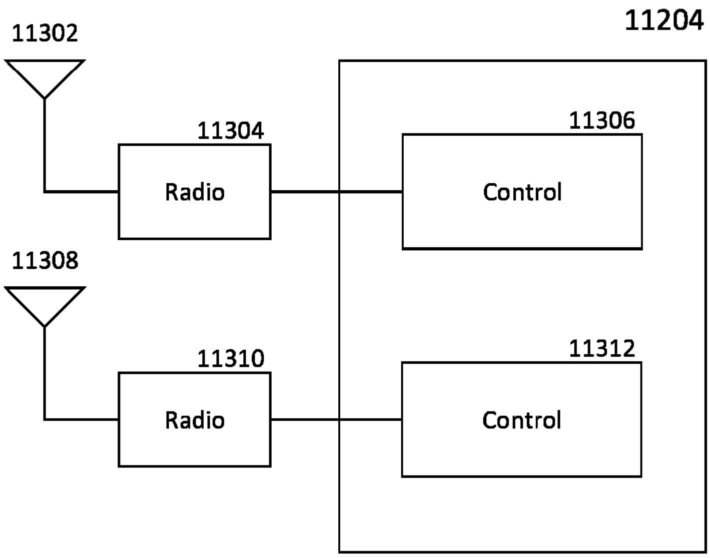
11302
11204
11304
Radio
11306
Control
11308
11310
Radio
11312
Control

# FIG 114

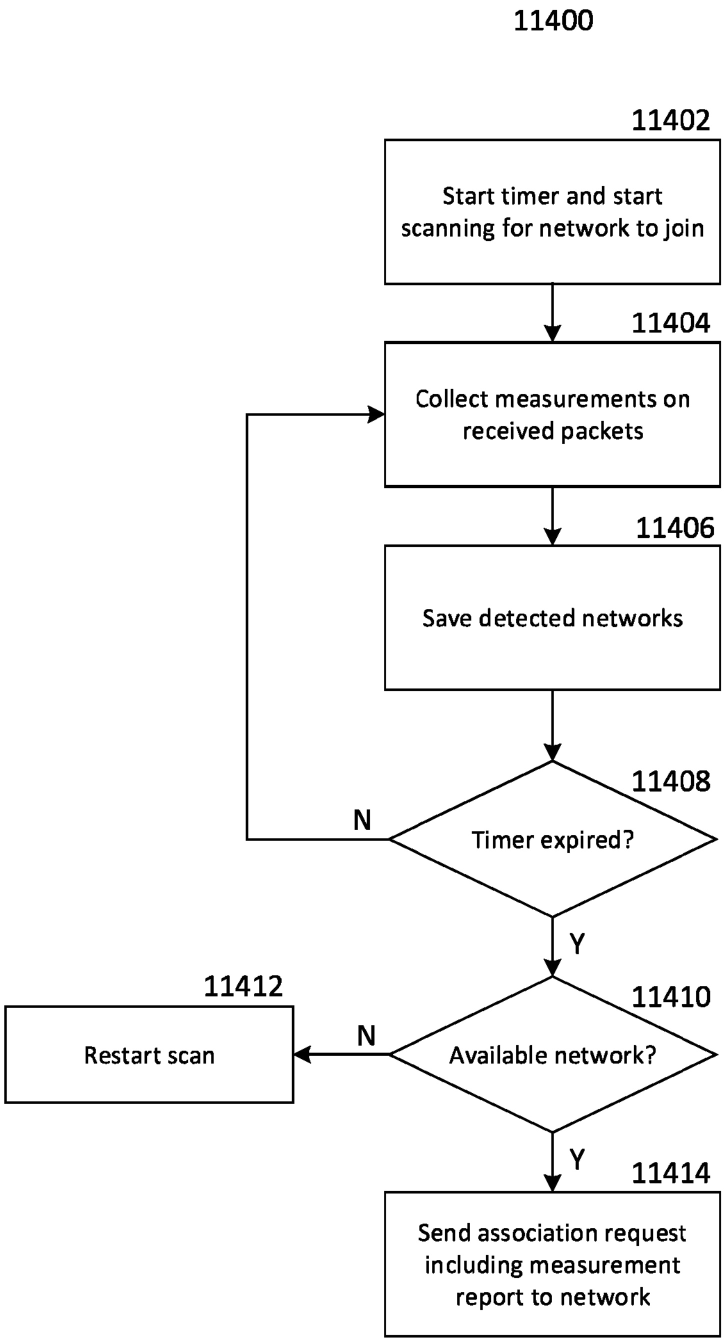
11400
11402
Start timer and start scanning for network to join
11404
Collect measurements on received packets
11406
Save detected networks
11408
Timer expired?
N
Y
11410
Available network?
N
11412
Restart scan
Y
11414
Send association request including measurement report to network

FIG 115

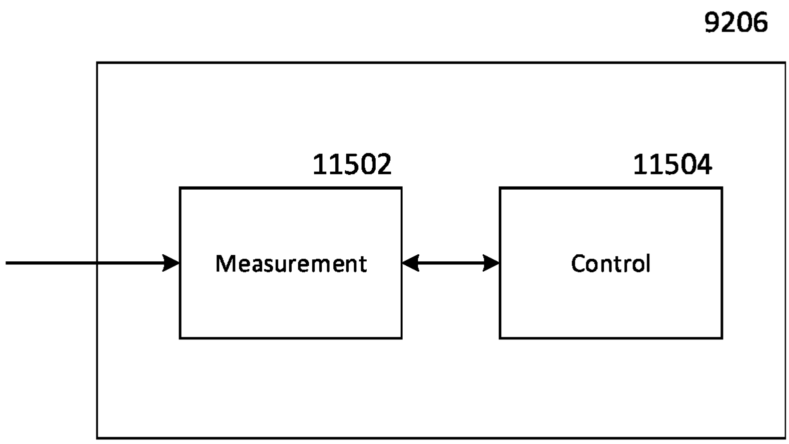

FIG 116

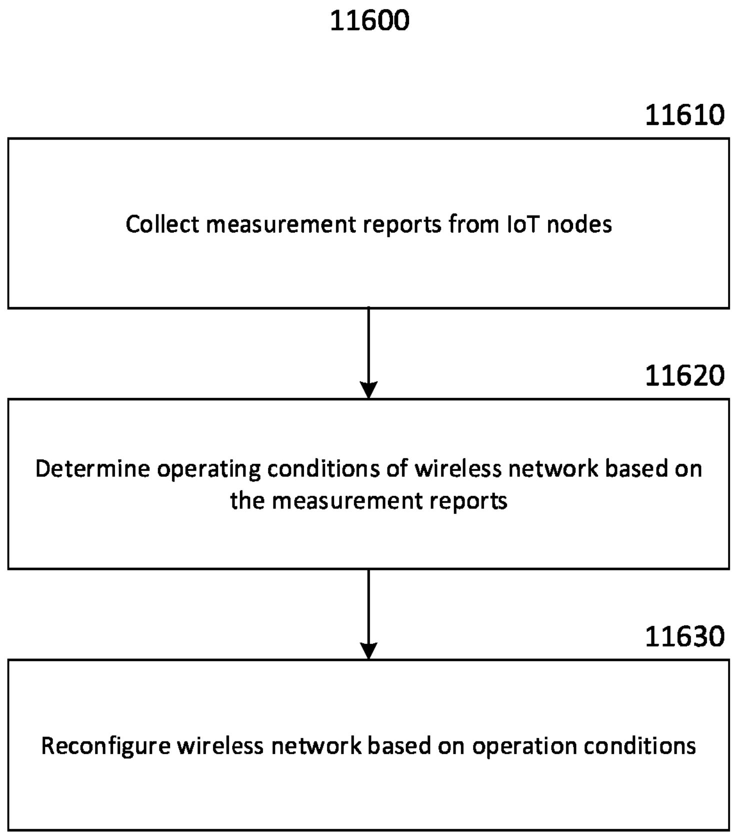
11600
11610
Collect measurement reports from IoT nodes
11620
Determine operating conditions of wireless network based on the measurement reports
11630
Reconfigure wireless network based on operation conditions

FIG 117

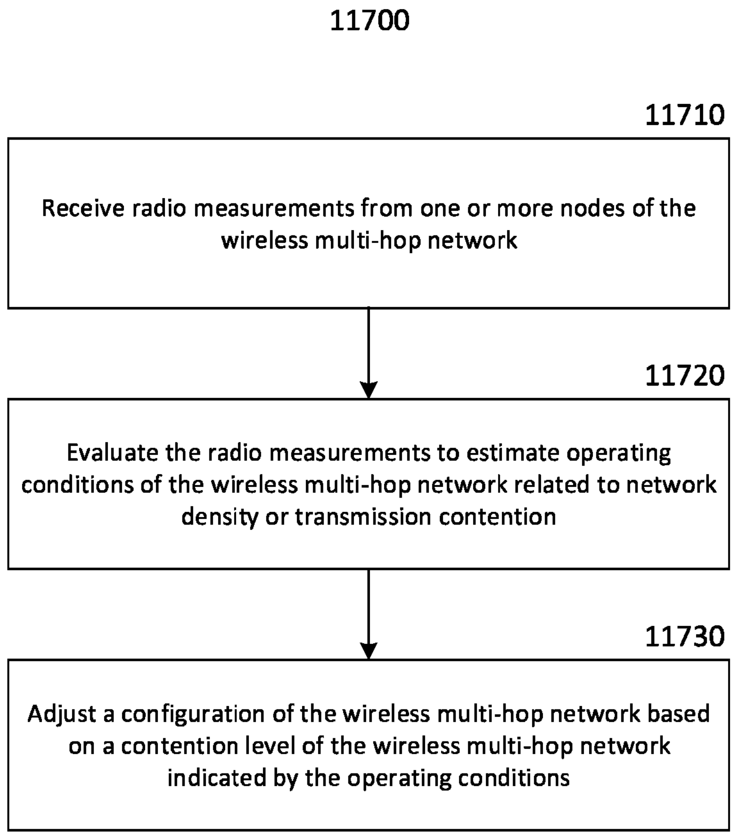
11700
11710
Receive radio measurements from one or more nodes of the wireless multi-hop network
11720
Evaluate the radio measurements to estimate operating conditions of the wireless multi-hop network related to network density or transmission contention
11730
Adjust a configuration of the wireless multi-hop network based on a contention level of the wireless multi-hop network indicated by the operating conditions

FIG 118

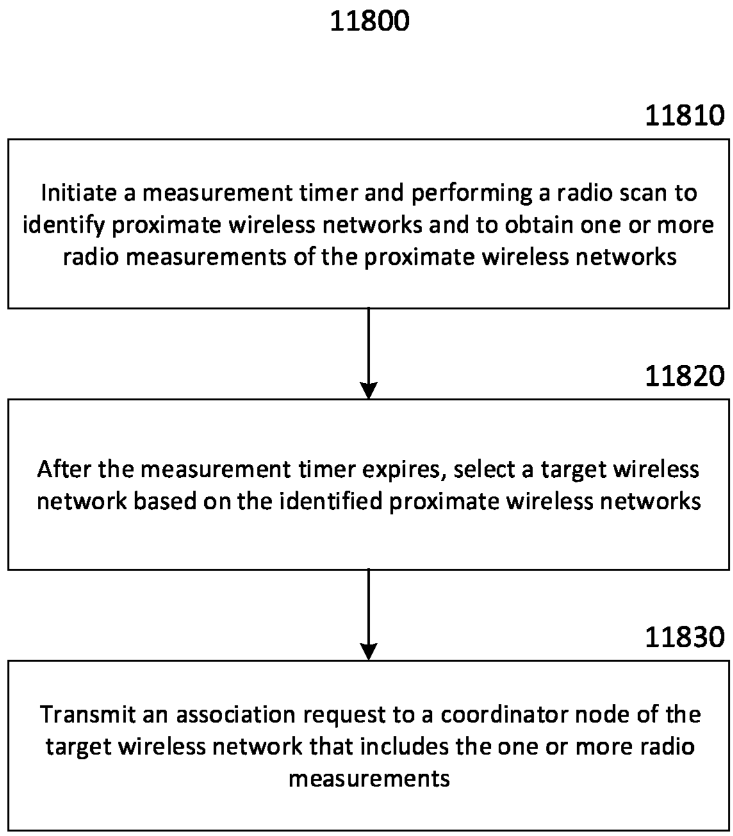
11800
11810
Initiate a measurement timer and performing a radio scan to identify proximate wireless networks and to obtain one or more radio measurements of the proximate wireless networks
11820
After the measurement timer expires, select a target wireless network based on the identified proximate wireless networks
11830
Transmit an association request to a coordinator node of the target wireless network that includes the one or more radio measurements

FIG 119

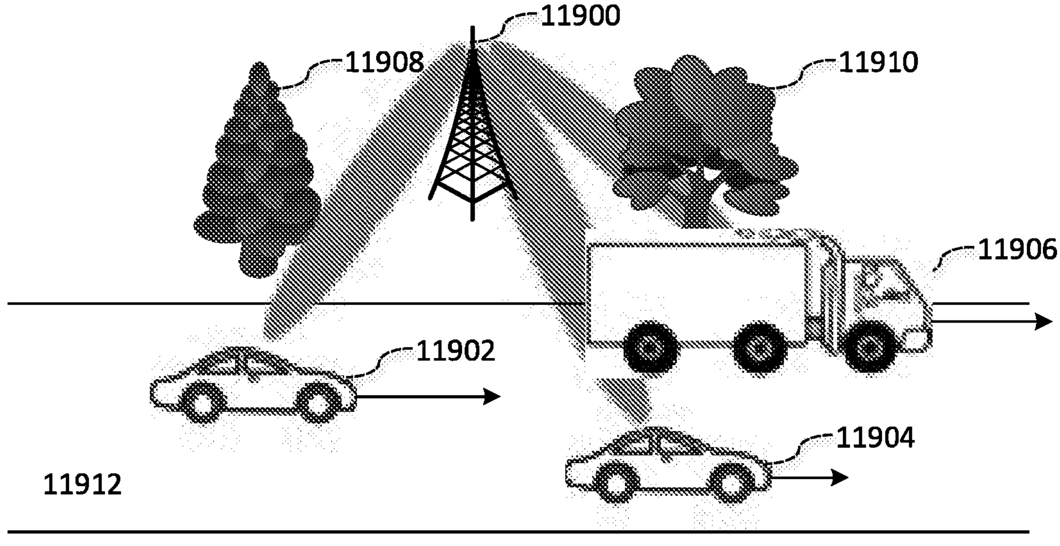

FIG 120

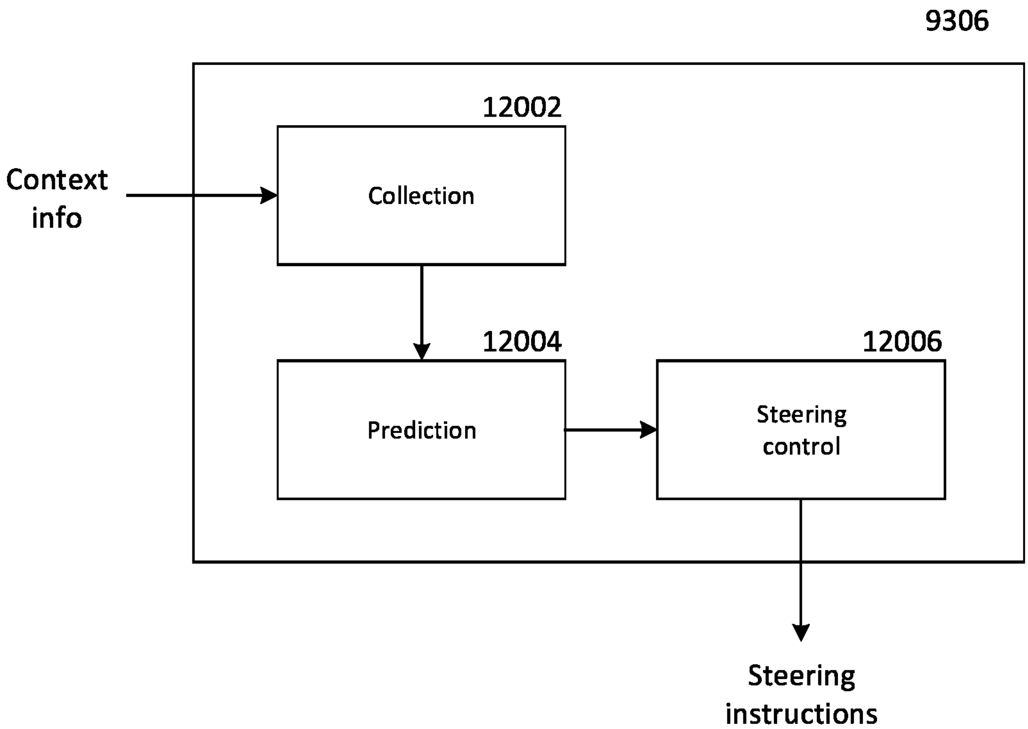
9306
12002
Context
info
Collection
12004
12006
Prediction
Steering
control
Steering
instructions

FIG 121

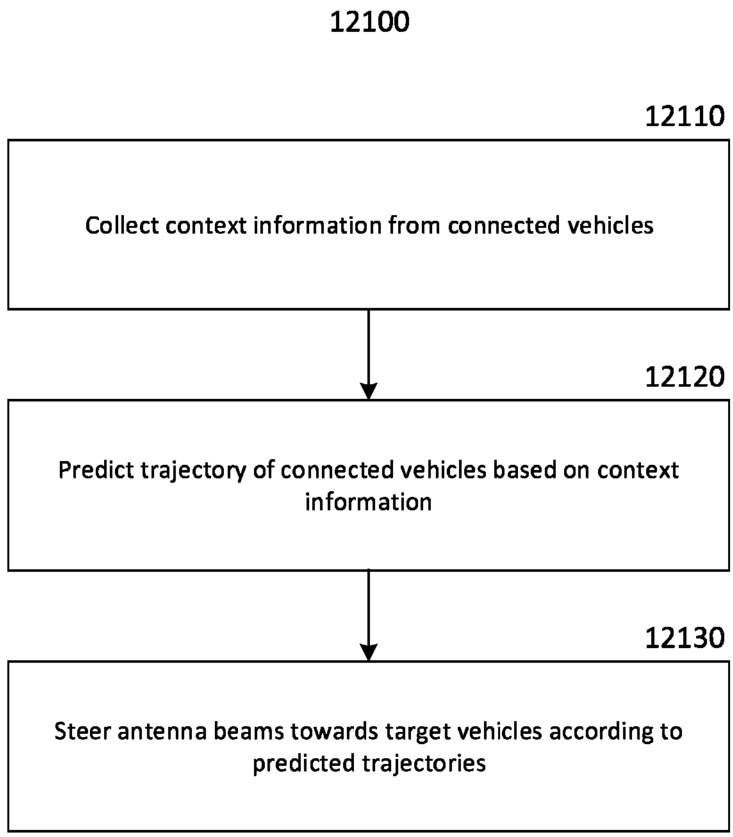
12100
12110
Collect context information from connected vehicles
12120
Predict trajectory of connected vehicles based on context information
12130
Steer antenna beams towards target vehicles according to predicted trajectories

# FIG 122

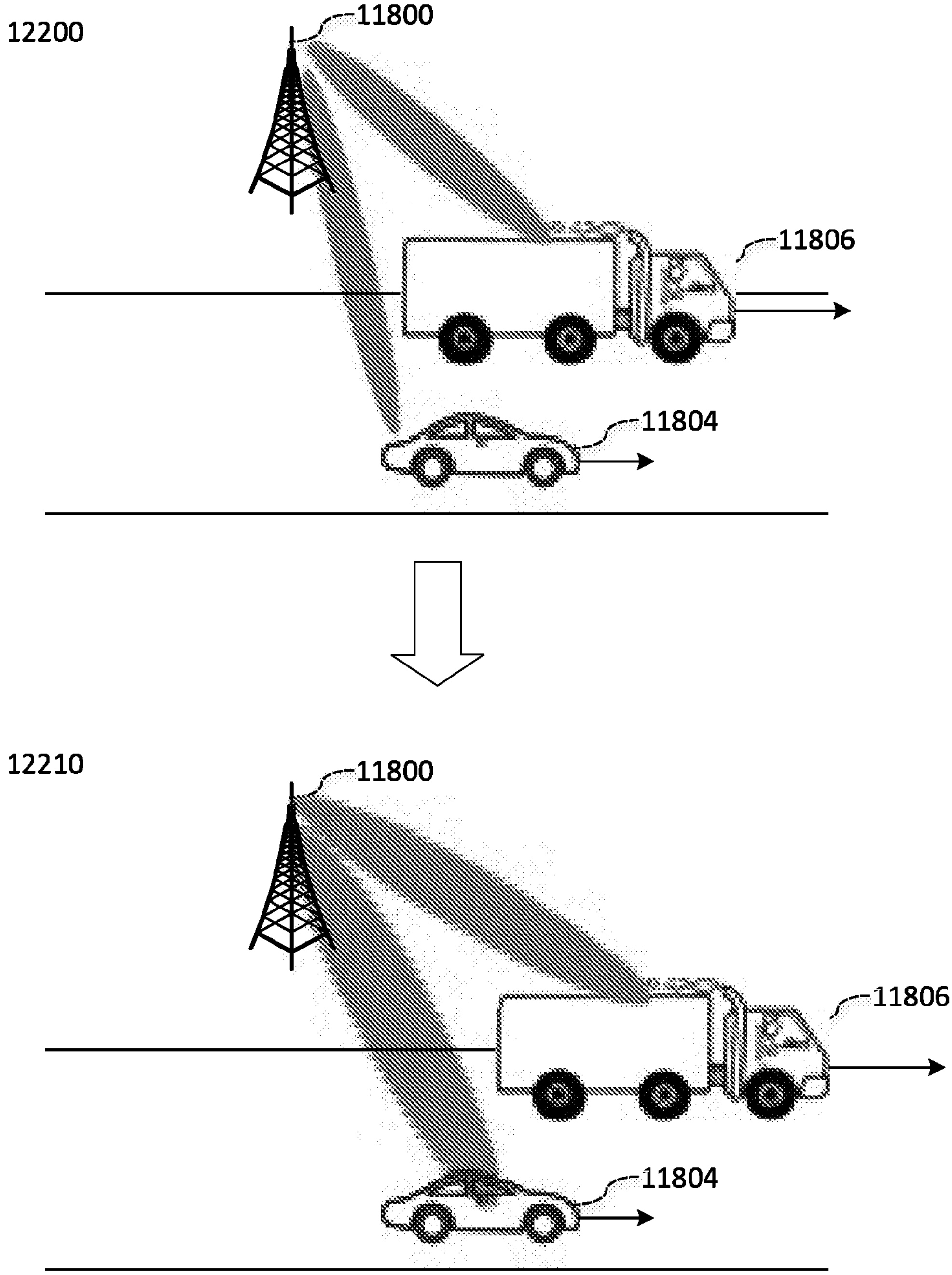

FIG 123

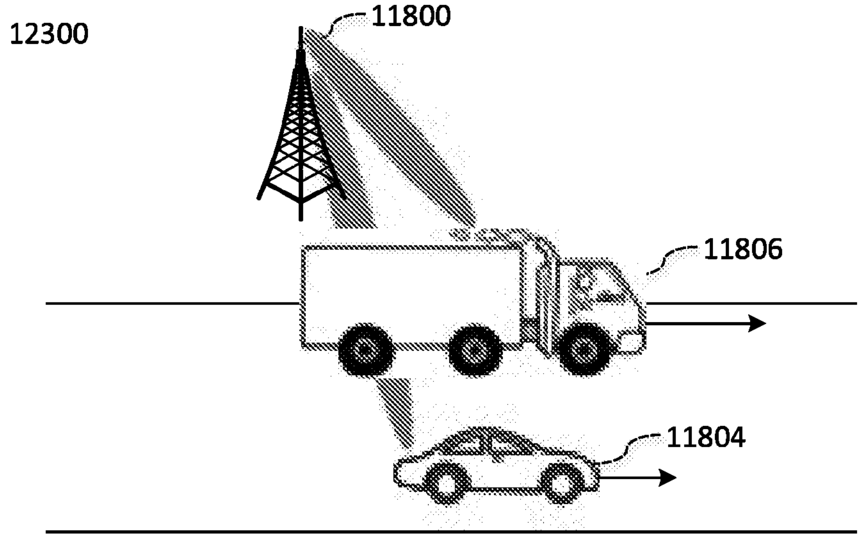

FIG 124

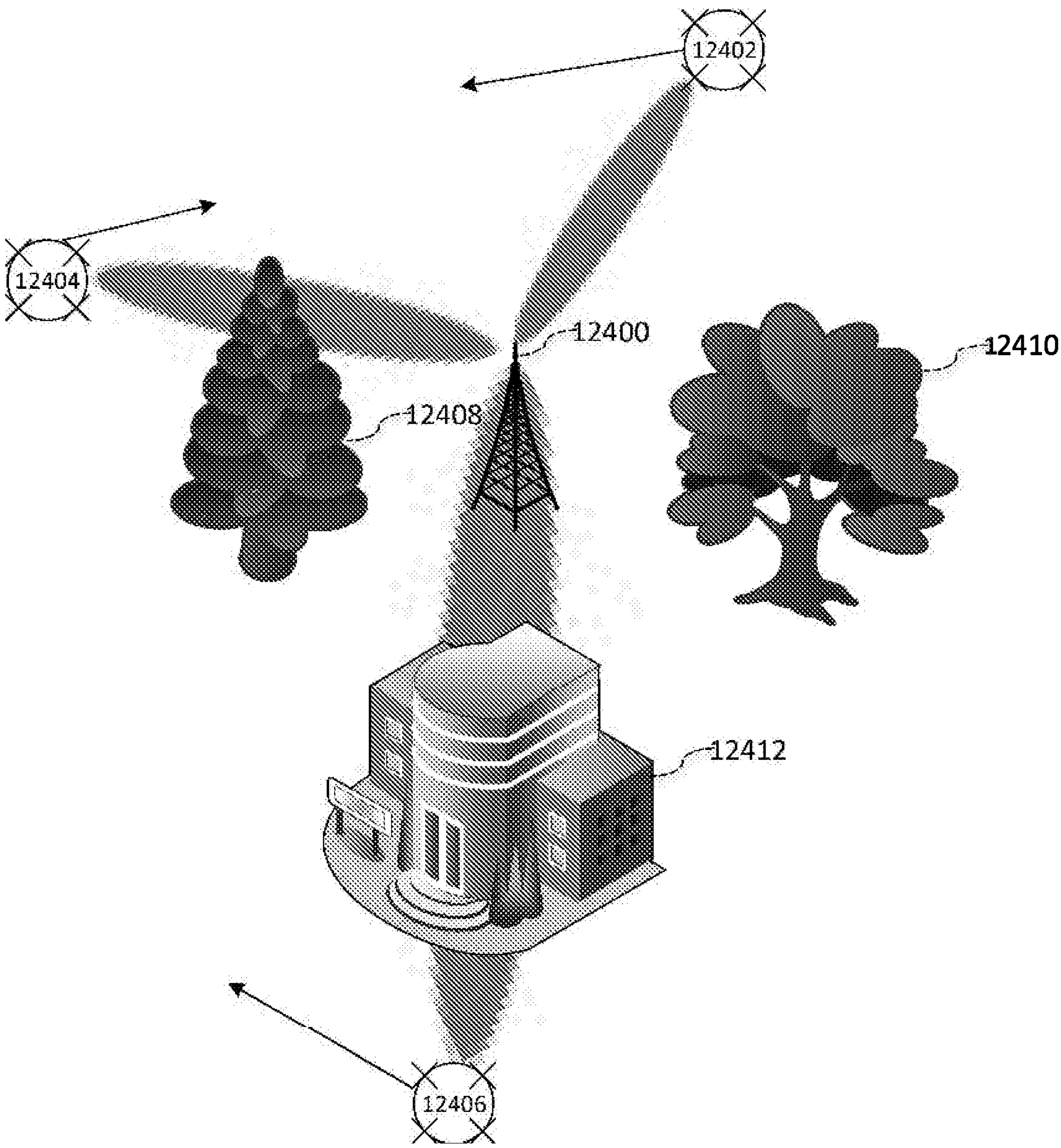

FIG 125

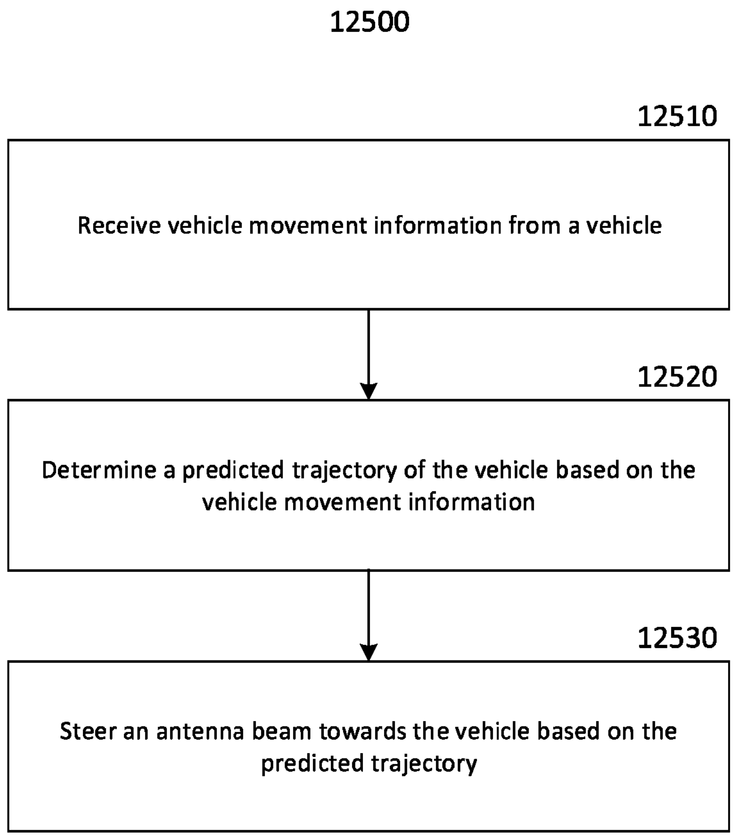
12500
12510
Receive vehicle movement information from a vehicle
12520
Determine a predicted trajectory of the vehicle based on the vehicle movement information
12530
Steer an antenna beam towards the vehicle based on the predicted trajectory

FIG 126

12600

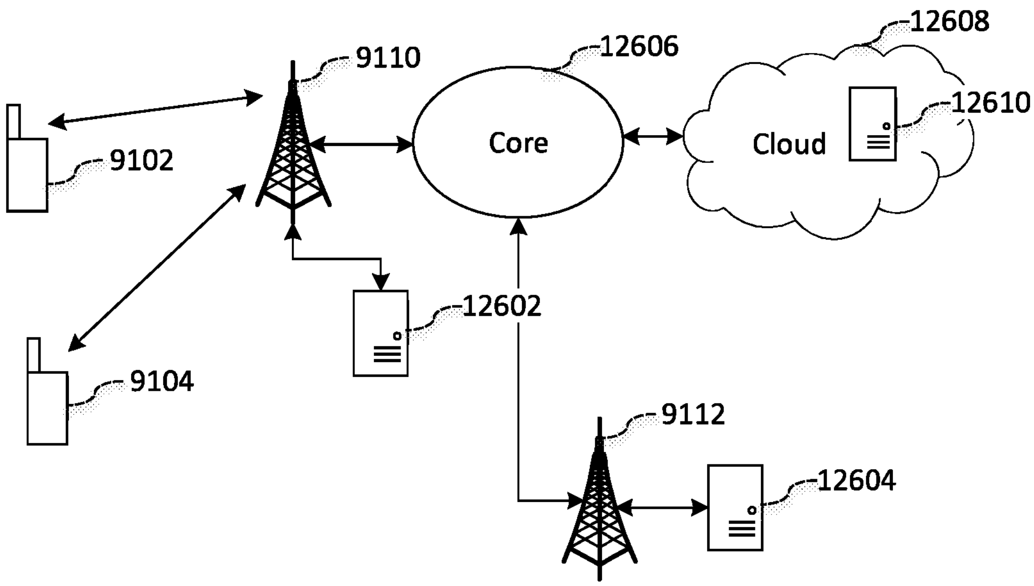

FIG 127

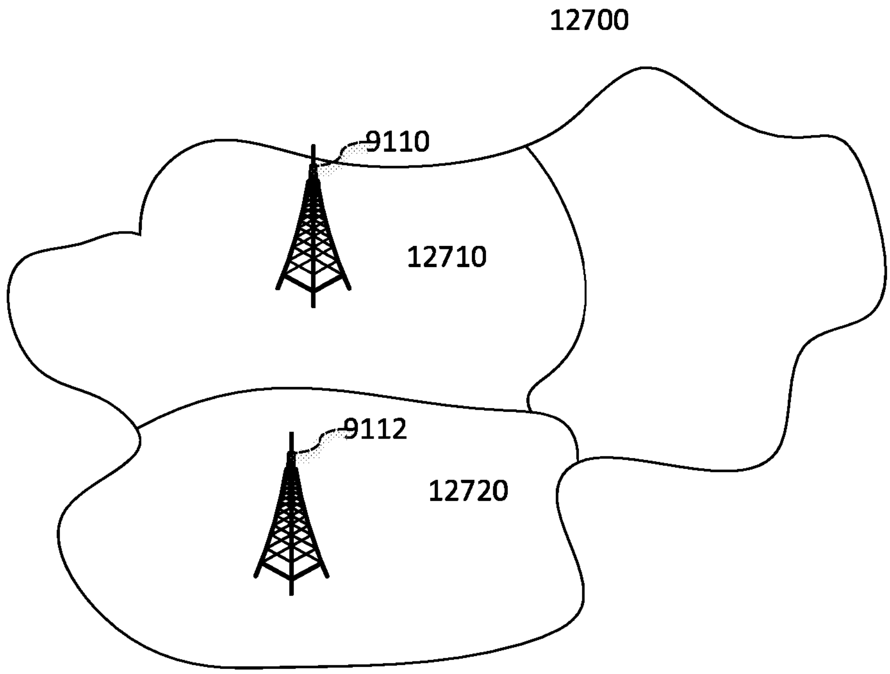

FIG 128

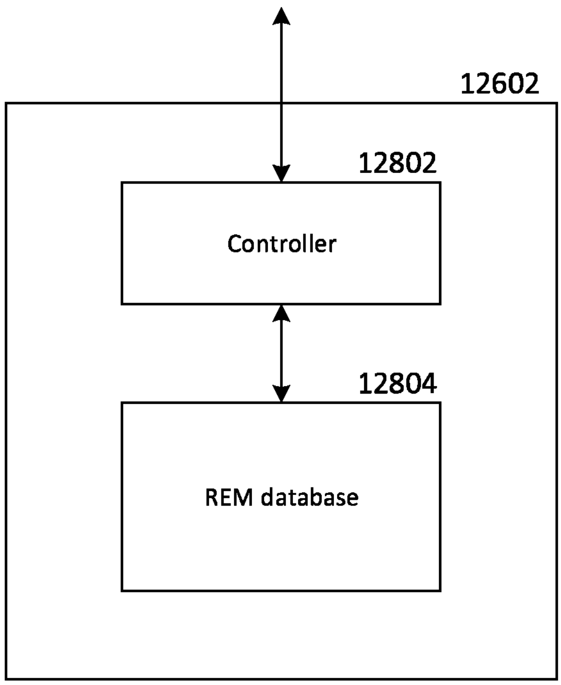

FIG 129

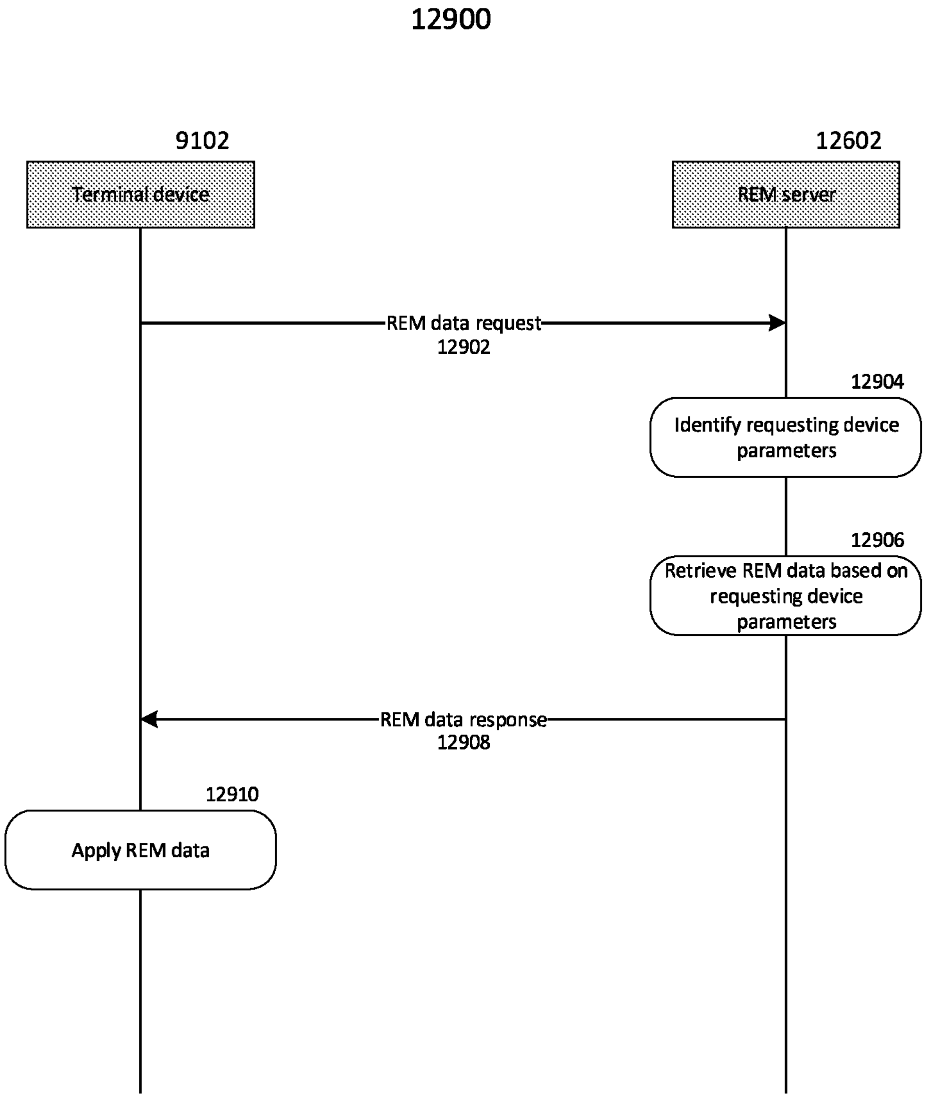
12900
9102
12602
Terminal device
REM server
REM data request
12902
12904
Identify requesting device parameters
12906
Retrieve REM data based on requesting device parameters
REM data response
12908
12910
Apply REM data

# FIG 130

13000

| Device Capabilities → <br><br> Context information detail level ↓ | Capability class 0 | ... | Capability class "N" |
|---|---|---|---|
| Detail level 0 | Capabilities include 2G/3G/LTE & WiFi <br><br> Details include rudimentary information on RAT availability <br><br> Efficiency metric indication (probably low due to low information availability) | | Capabilities include 2G/3G/LTE & WiFi & mmWave & TV White Space & .... <br><br> Details include rudimentary information on RAT availability <br><br> Efficiency metric indication (probably low due to low information availability) |
| ... | | | |
| Detail level "M" | Capabilities include 2G/3G/LTE & WiFi <br><br> Details include detailed information on RAT availability and related performance KPIs (observed network load, PER/HARQ performance, etc.) <br><br> Efficiency metric indication (probably high due to high information availability) | | Capabilities include 2G/3G/LTE & WiFi & mmWave & TV White Space & .... <br><br> Details include detailed information on RAT availability and related performance KPIs (observed network load, PER/HARQ performance, etc.) <br><br> Efficiency metric indication (probably high due to high information availability) |

FIG 131

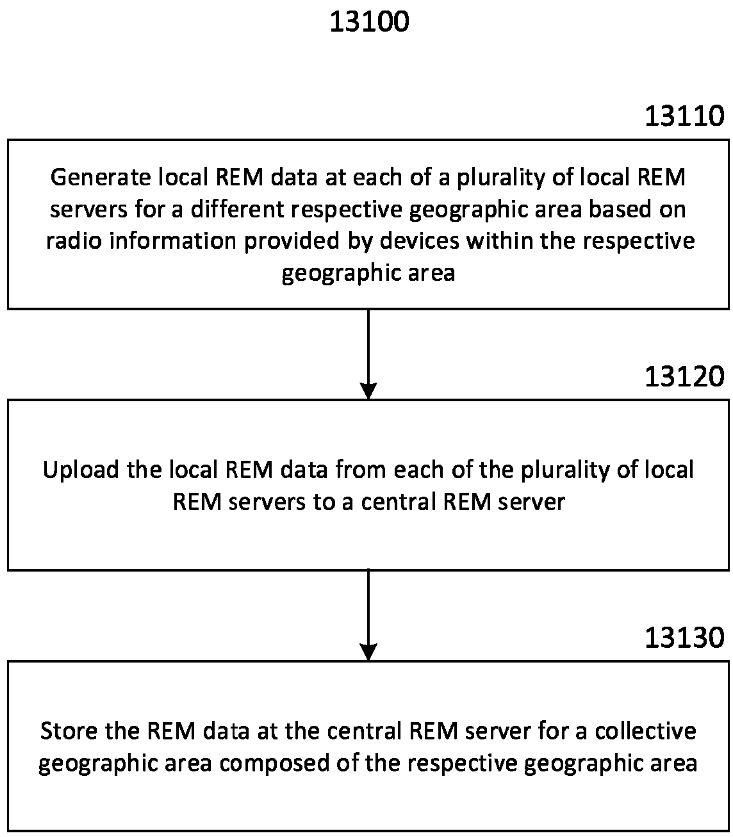
13100
13110
Generate local REM data at each of a plurality of local REM servers for a different respective geographic area based on radio information provided by devices within the respective geographic area
13120
Upload the local REM data from each of the plurality of local REM servers to a central REM server
13130
Store the REM data at the central REM server for a collective geographic area composed of the respective geographic area

FIG 132

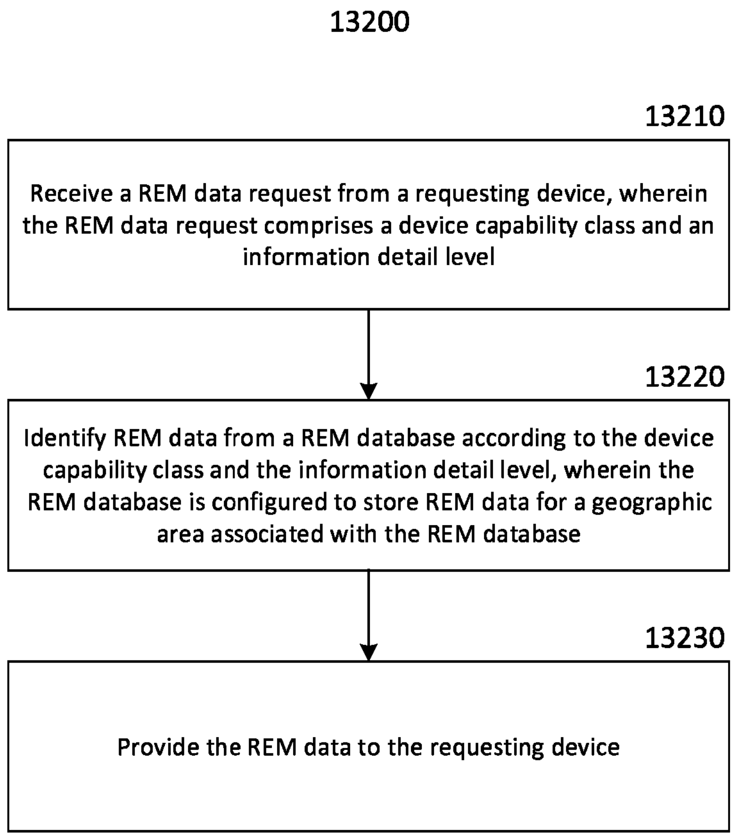
13200
13210
Receive a REM data request from a requesting device, wherein the REM data request comprises a device capability class and an information detail level
13220
Identify REM data from a REM database according to the device capability class and the information detail level, wherein the REM database is configured to store REM data for a geographic area associated with the REM database
13230
Provide the REM data to the requesting device

FIG 133

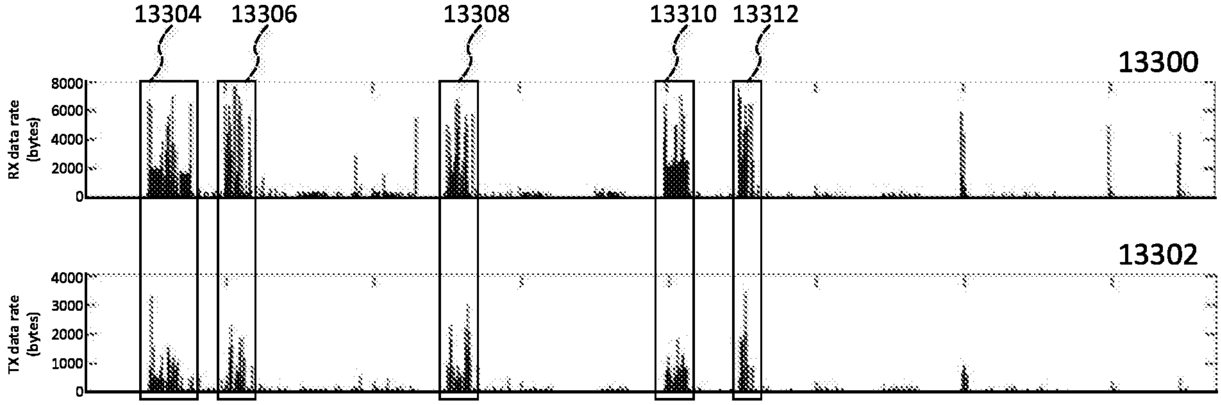
13304
13306
13308
13310
13312
13300
13302
8000
6000
4000
2000
0
RX data rate
(bytes)
4000
3000
2000
1000
0
TX data rate
(bytes)

FIG 134

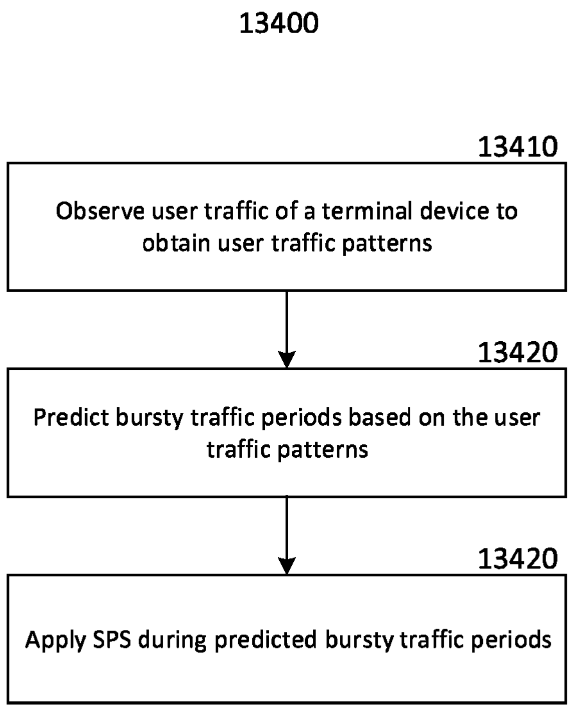
13400
13410
Observe user traffic of a terminal device to obtain user traffic patterns
13420
Predict bursty traffic periods based on the user traffic patterns
13420
Apply SPS during predicted bursty traffic periods

FIG 135

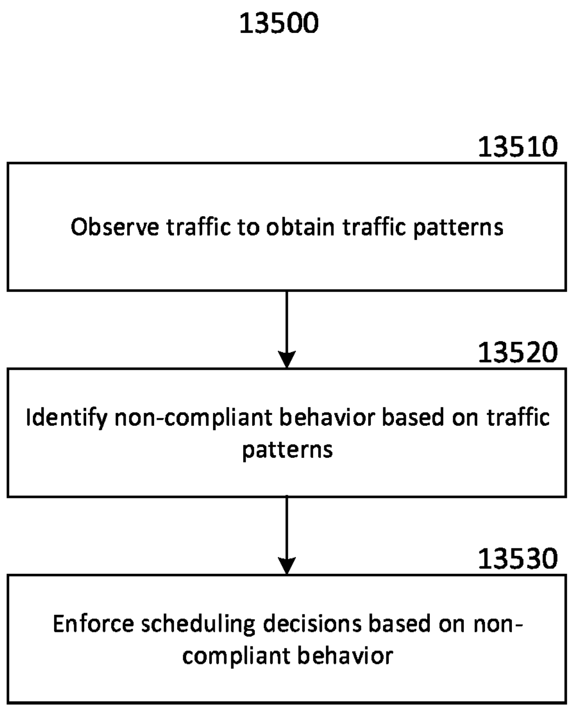
13500
13510
Observe traffic to obtain traffic patterns
13520
Identify non-compliant behavior based on traffic patterns
13530
Enforce scheduling decisions based on non-compliant behavior

FIG 136

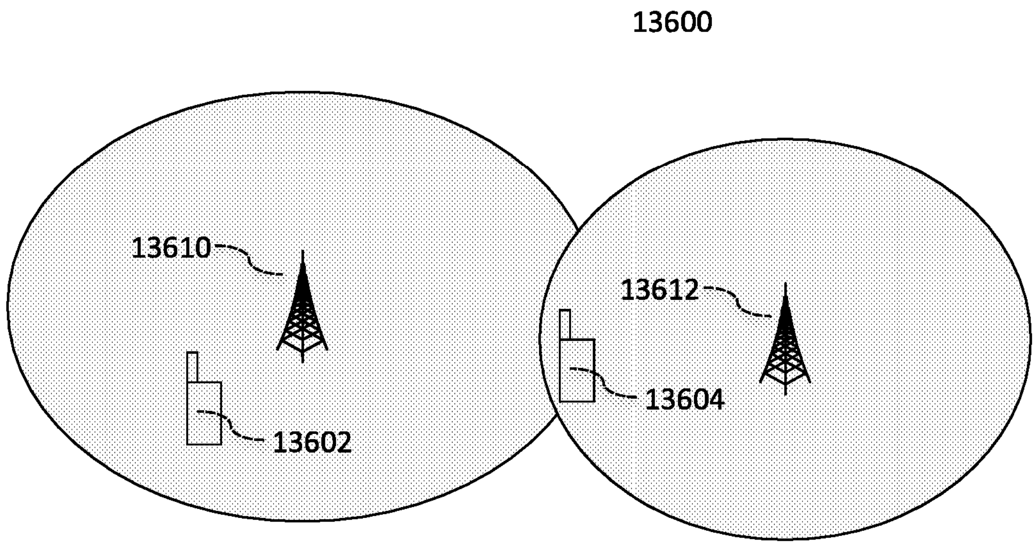

FIG 137

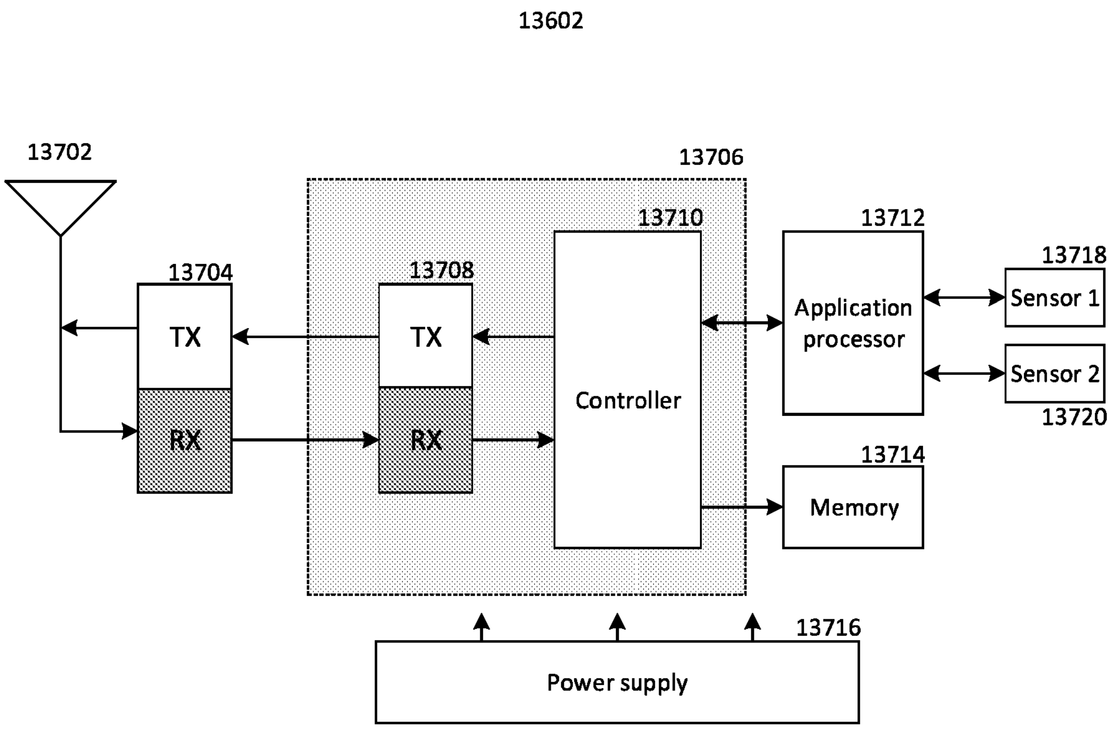
13602
13702
13706
13710
13712
13718
13704
13708
TX
TX
Application processor
Sensor 1
Controller
Sensor 2
RX
RX
13720
13714
Memory
13716
Power supply

FIG 138

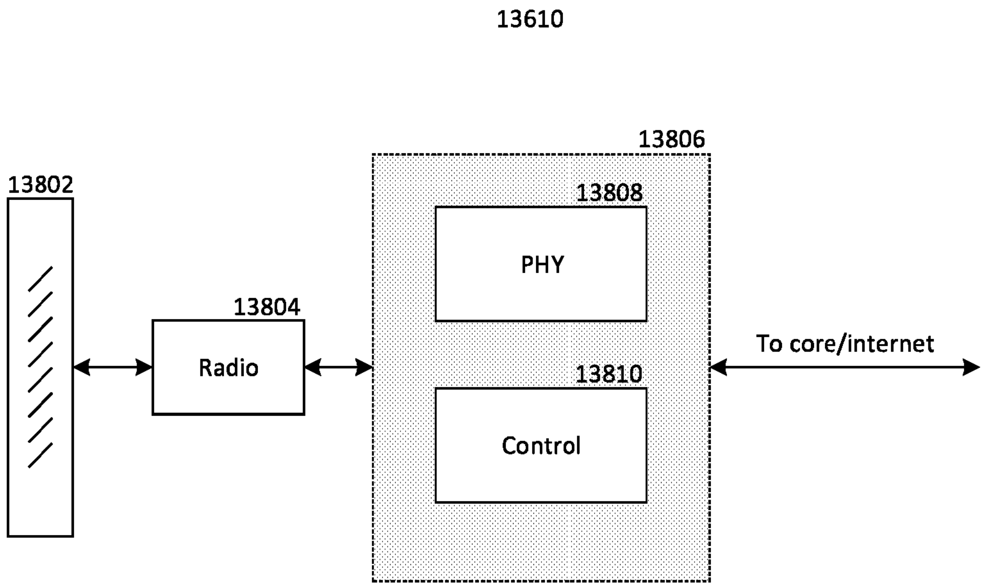
13610
13802
13804
Radio
13806
13808
PHY
13810
Control
To core/internet

FIG 139

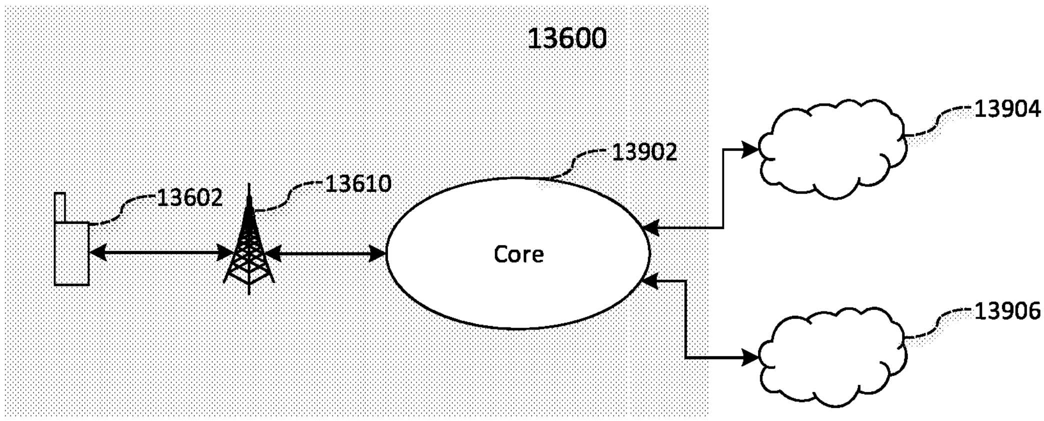

FIG 140

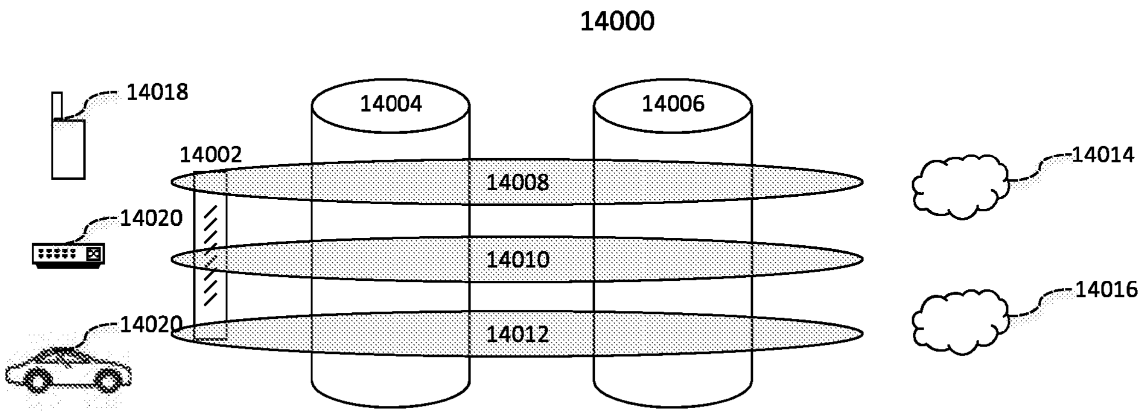
14000
14018
14004
14006
14002
14014
14008
14020
14010
14016
14020
14012

FIG 141

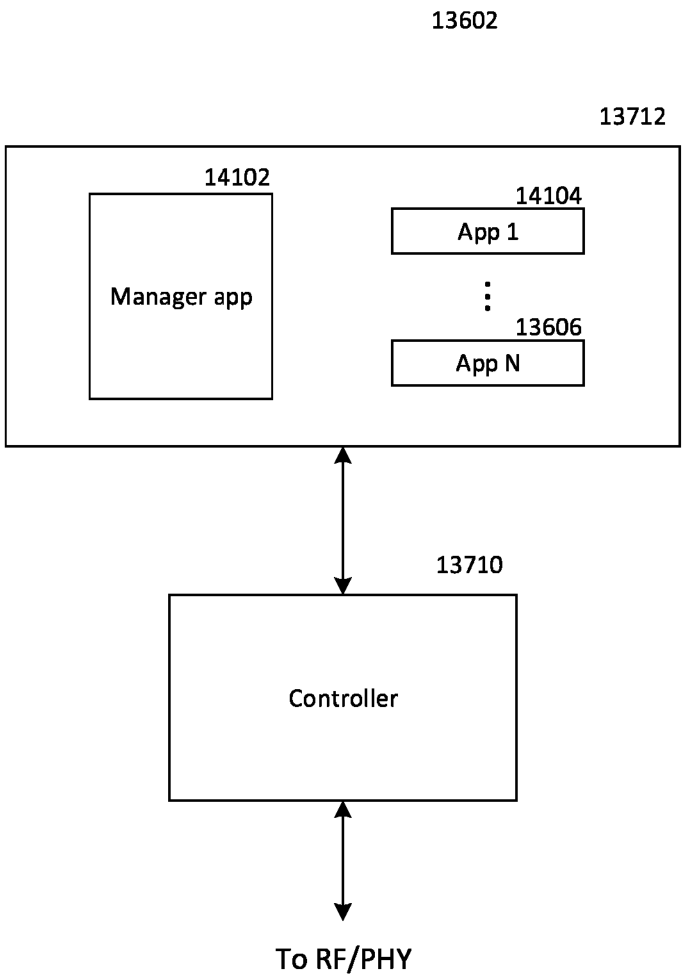
13602
13712
14102
Manager app
14104
App 1
13606
App N
13710
Controller
To RF/PHY

FIG 142

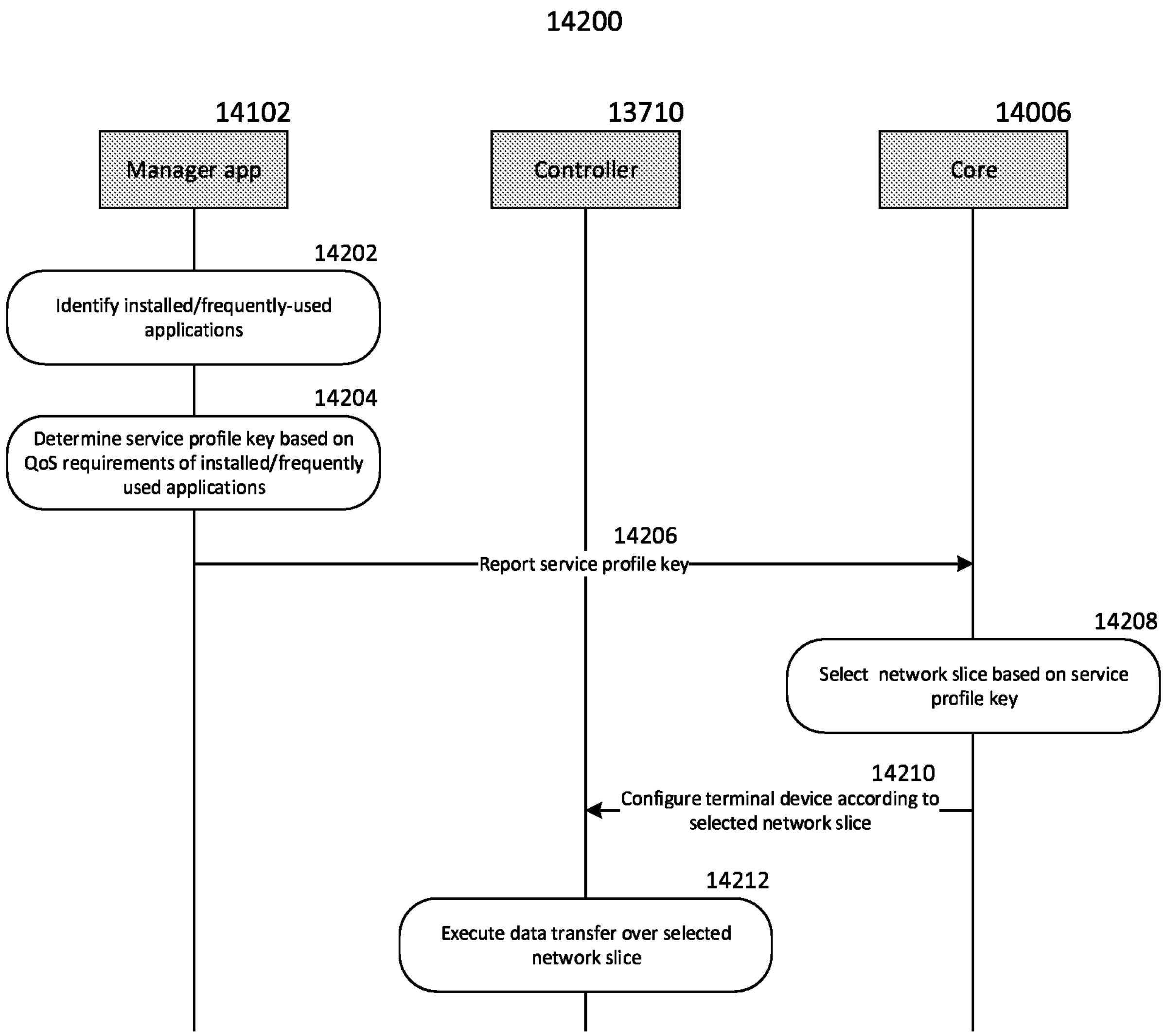
14200
14102
Manager app
13710
Controller
14006
Core
14202
Identify installed/frequently-used applications
14204
Determine service profile key based on QoS requirements of installed/frequently used applications
14206
Report service profile key
14208
Select network slice based on service profile key
14210
Configure terminal device according to selected network slice
14212
Execute data transfer over selected network slice

FIG 143

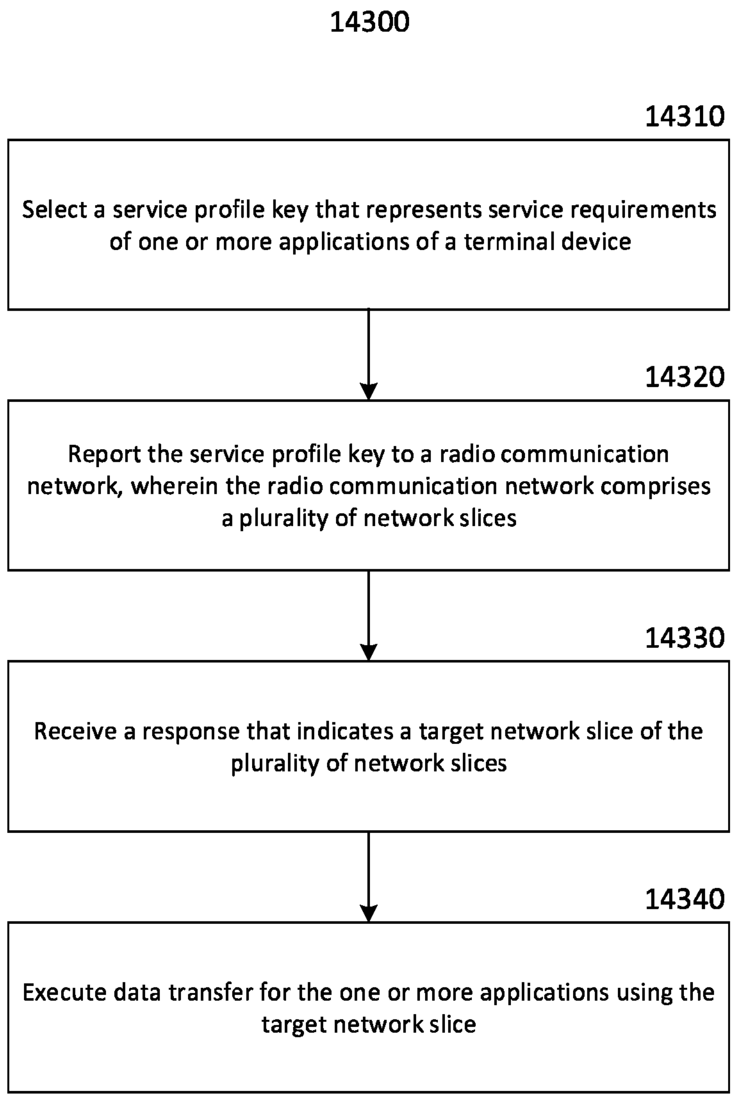
14300
14310
Select a service profile key that represents service requirements of one or more applications of a terminal device
14320
Report the service profile key to a radio communication network, wherein the radio communication network comprises a plurality of network slices
14330
Receive a response that indicates a target network slice of the plurality of network slices
14340
Execute data transfer for the one or more applications using the target network slice

FIG 144

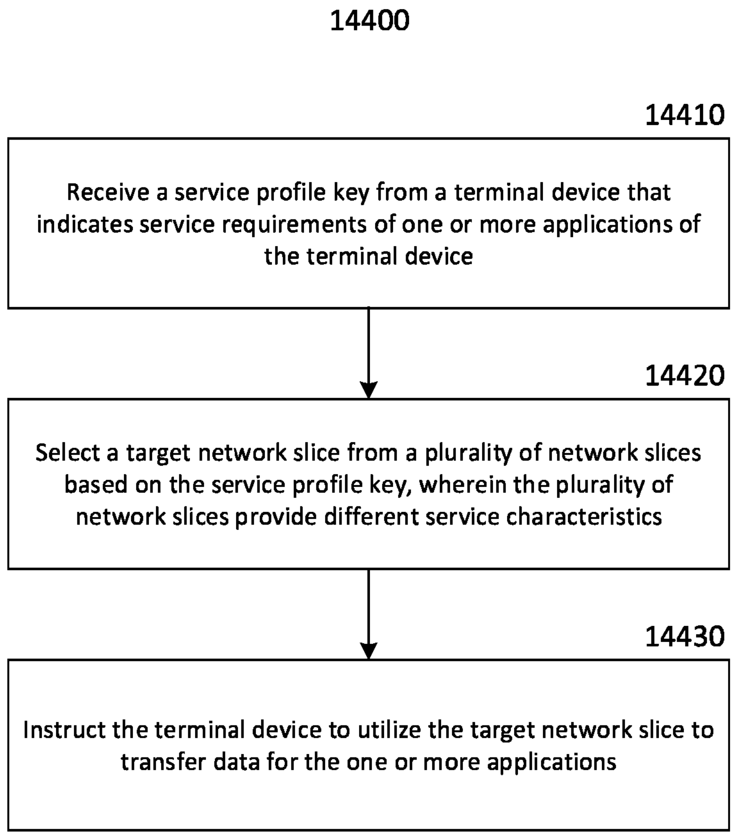
14400
14410
Receive a service profile key from a terminal device that indicates service requirements of one or more applications of the terminal device
14420
Select a target network slice from a plurality of network slices based on the service profile key, wherein the plurality of network slices provide different service characteristics
14430
Instruct the terminal device to utilize the target network slice to transfer data for the one or more applications

FIG 145

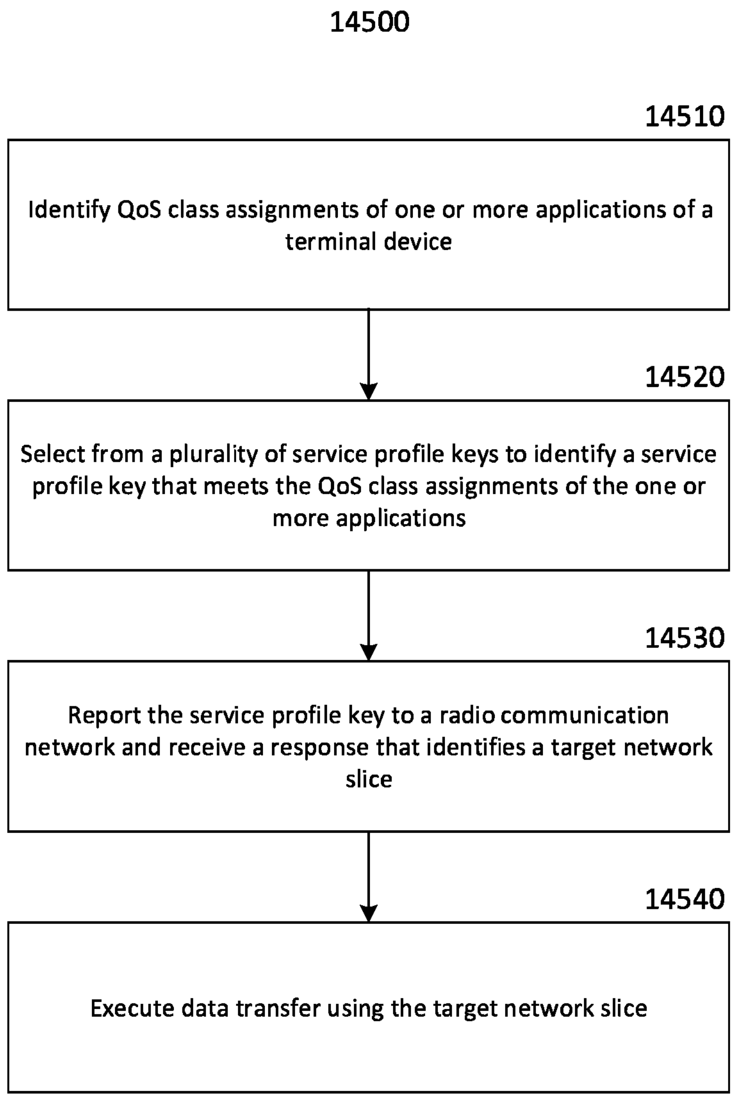
14500
14510
Identify QoS class assignments of one or more applications of a terminal device
14520
Select from a plurality of service profile keys to identify a service profile key that meets the QoS class assignments of the one or more applications
14530
Report the service profile key to a radio communication network and receive a response that identifies a target network slice
14540
Execute data transfer using the target network slice

FIG 146

14500

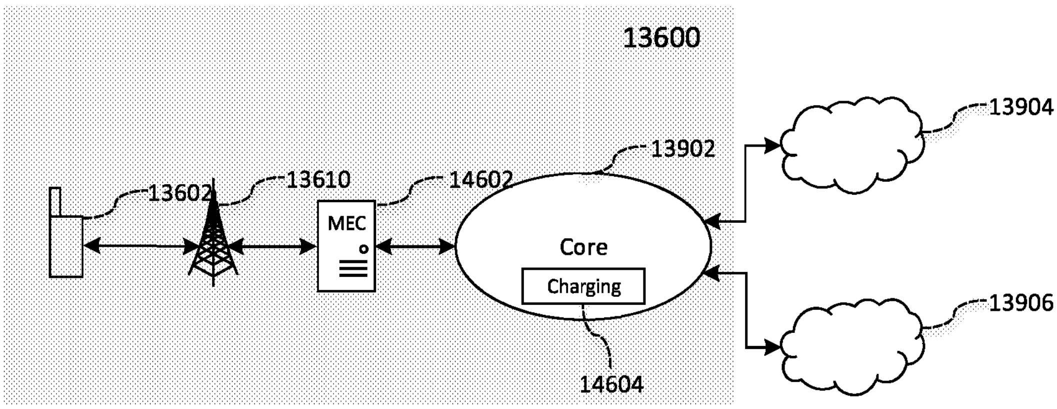

FIG 147

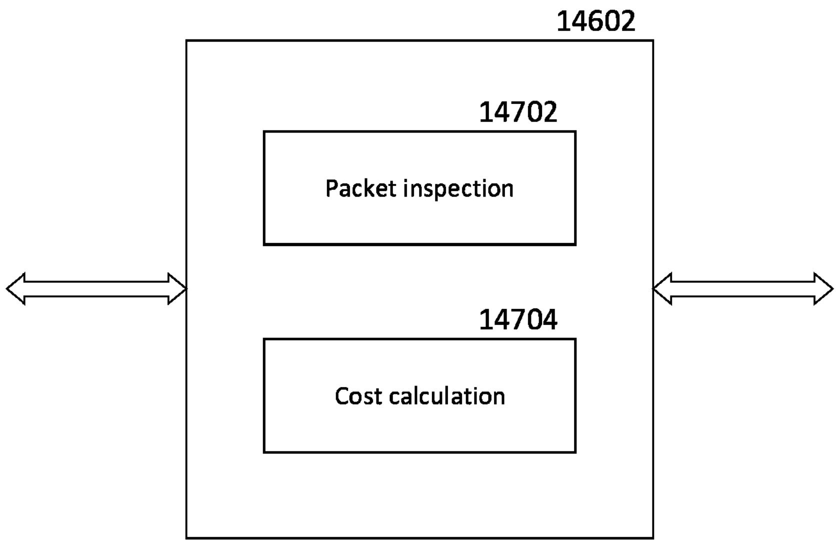

FIG 148

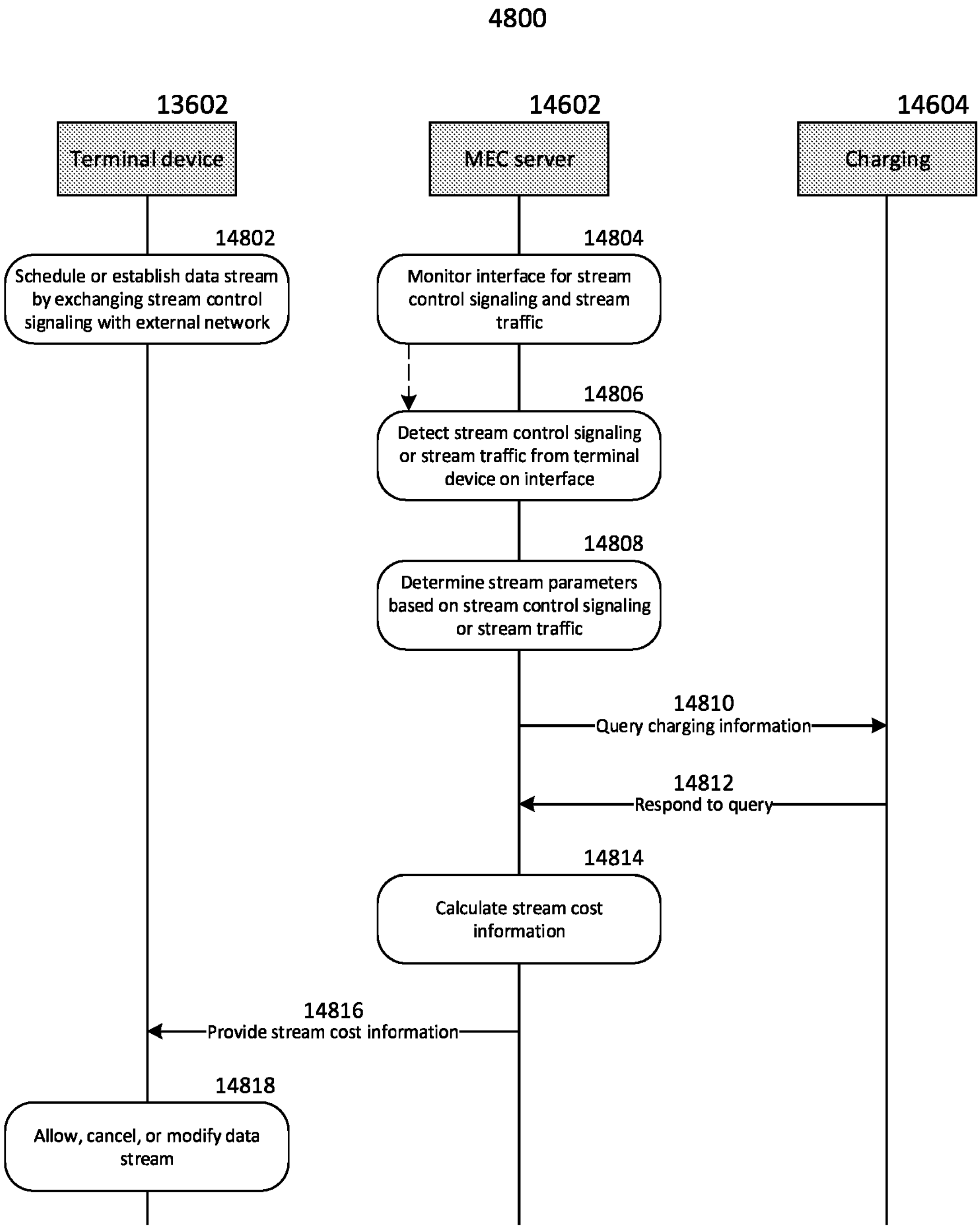
4800
13602
Terminal device
14602
MEC server
14604
Charging
14802
Schedule or establish data stream by exchanging stream control signaling with external network
14804
Monitor interface for stream control signaling and stream traffic
14806
Detect stream control signaling or stream traffic from terminal device on interface
14808
Determine stream parameters based on stream control signaling or stream traffic
14810
Query charging information
14812
Respond to query
14814
Calculate stream cost information
14816
Provide stream cost information
14818
Allow, cancel, or modify data stream

FIG 149

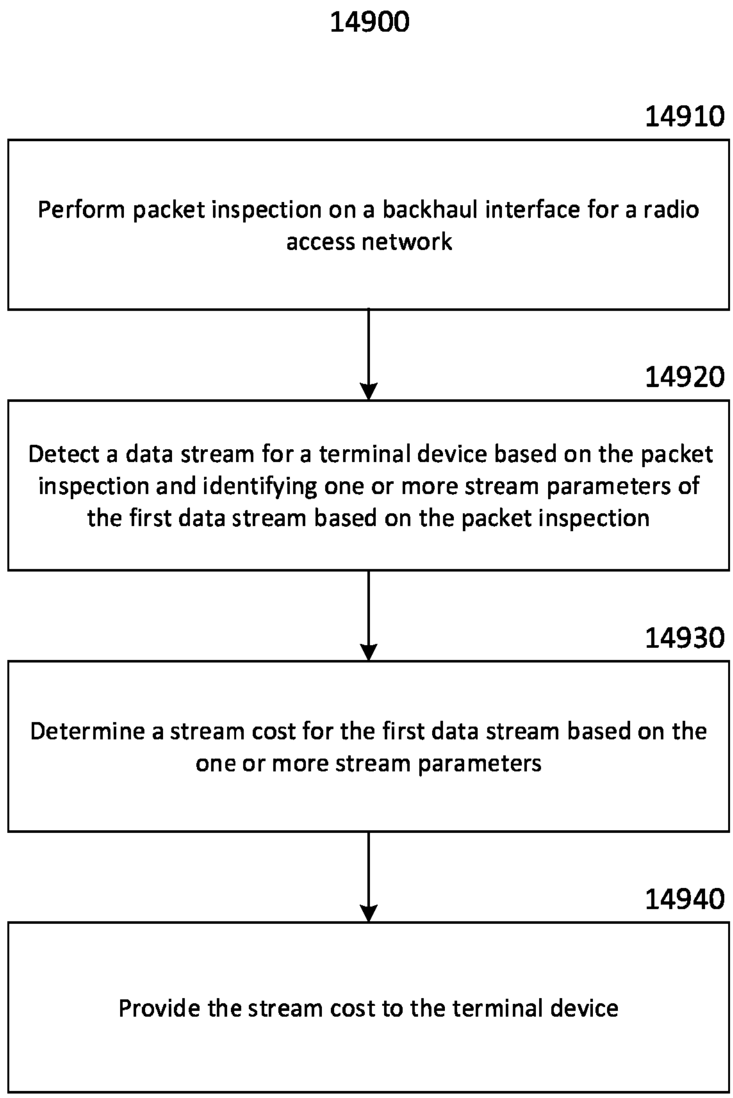
14900
14910
Perform packet inspection on a backhaul interface for a radio access network
14920
Detect a data stream for a terminal device based on the packet inspection and identifying one or more stream parameters of the first data stream based on the packet inspection
14930
Determine a stream cost for the first data stream based on the one or more stream parameters
14940
Provide the stream cost to the terminal device

FIG 150

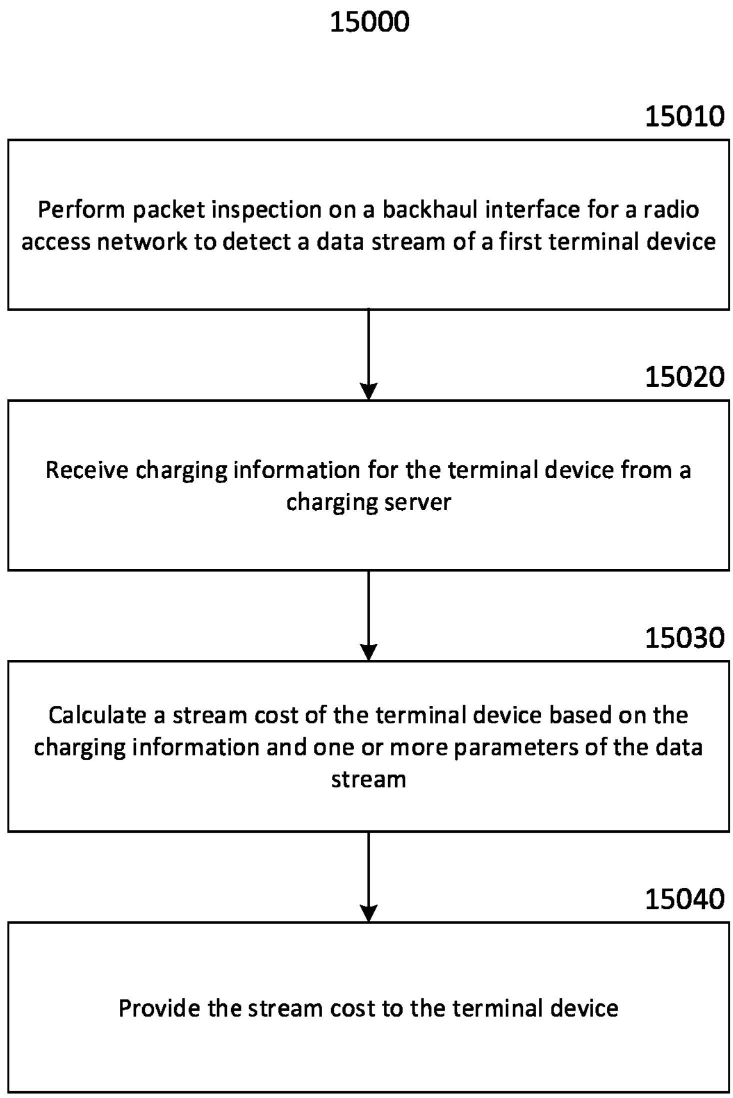
15000
15010
Perform packet inspection on a backhaul interface for a radio access network to detect a data stream of a first terminal device
15020
Receive charging information for the terminal device from a charging server
15030
Calculate a stream cost of the terminal device based on the charging information and one or more parameters of the data stream
15040
Provide the stream cost to the terminal device

FIG 151

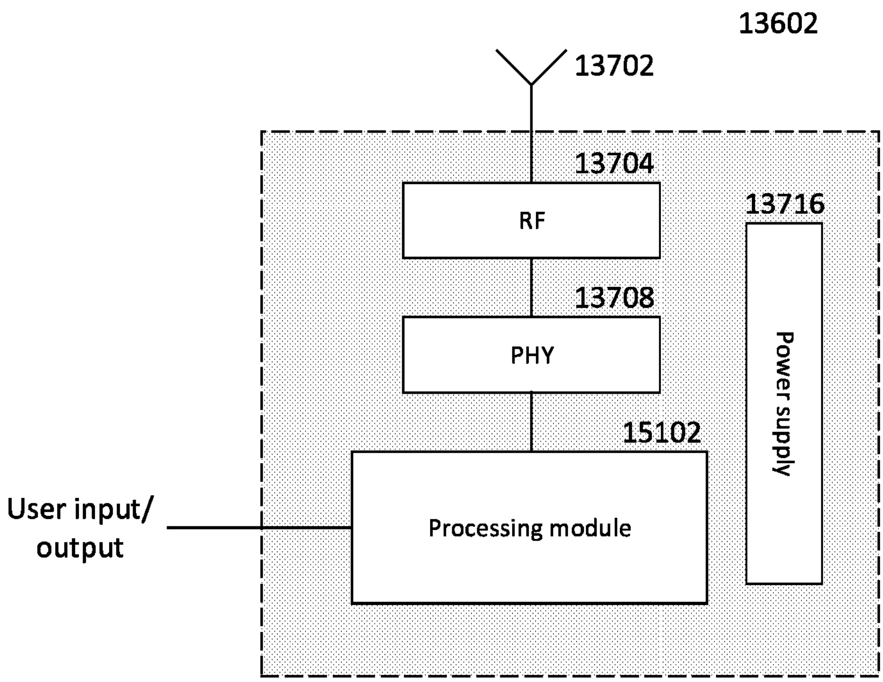
13602
13702
13704
RF
13716
13708
PHY
Power supply
15102
User input/
output
Processing module

FIG 152

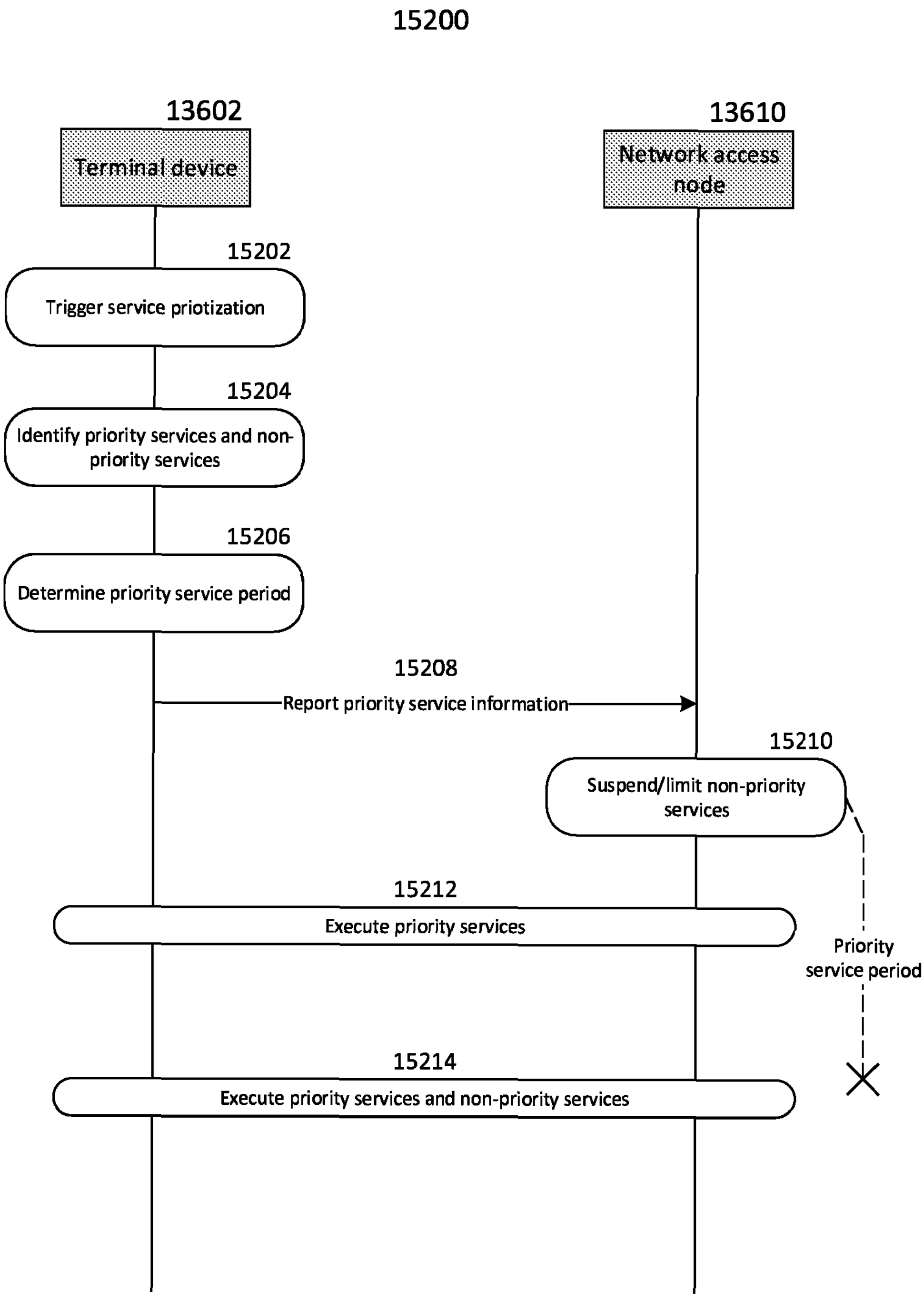
15200
13602
Terminal device
13610
Network access node
15202
Trigger service priotization
15204
Identify priority services and non-priority services
15206
Determine priority service period
15208
Report priority service information
15210
Suspend/limit non-priority services
15212
Execute priority services
Priority service period
15214
Execute priority services and non-priority services

FIG 153

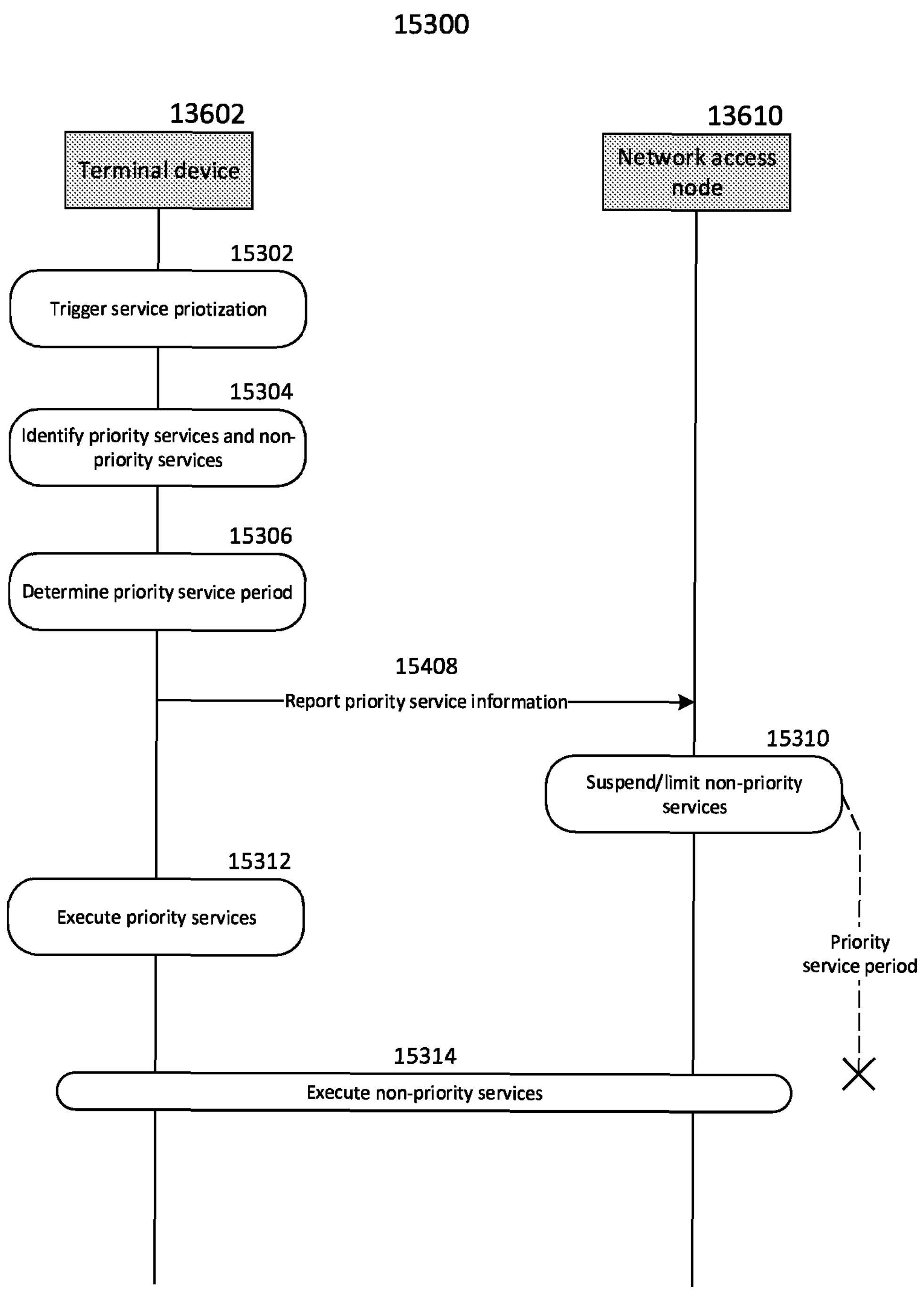
15300
13602
Terminal device
13610
Network access node
15302
Trigger service priotization
15304
Identify priority services and non-priority services
15306
Determine priority service period
15408
Report priority service information
15310
Suspend/limit non-priority services
15312
Execute priority services
Priority service period
15314
Execute non-priority services

FIG 154

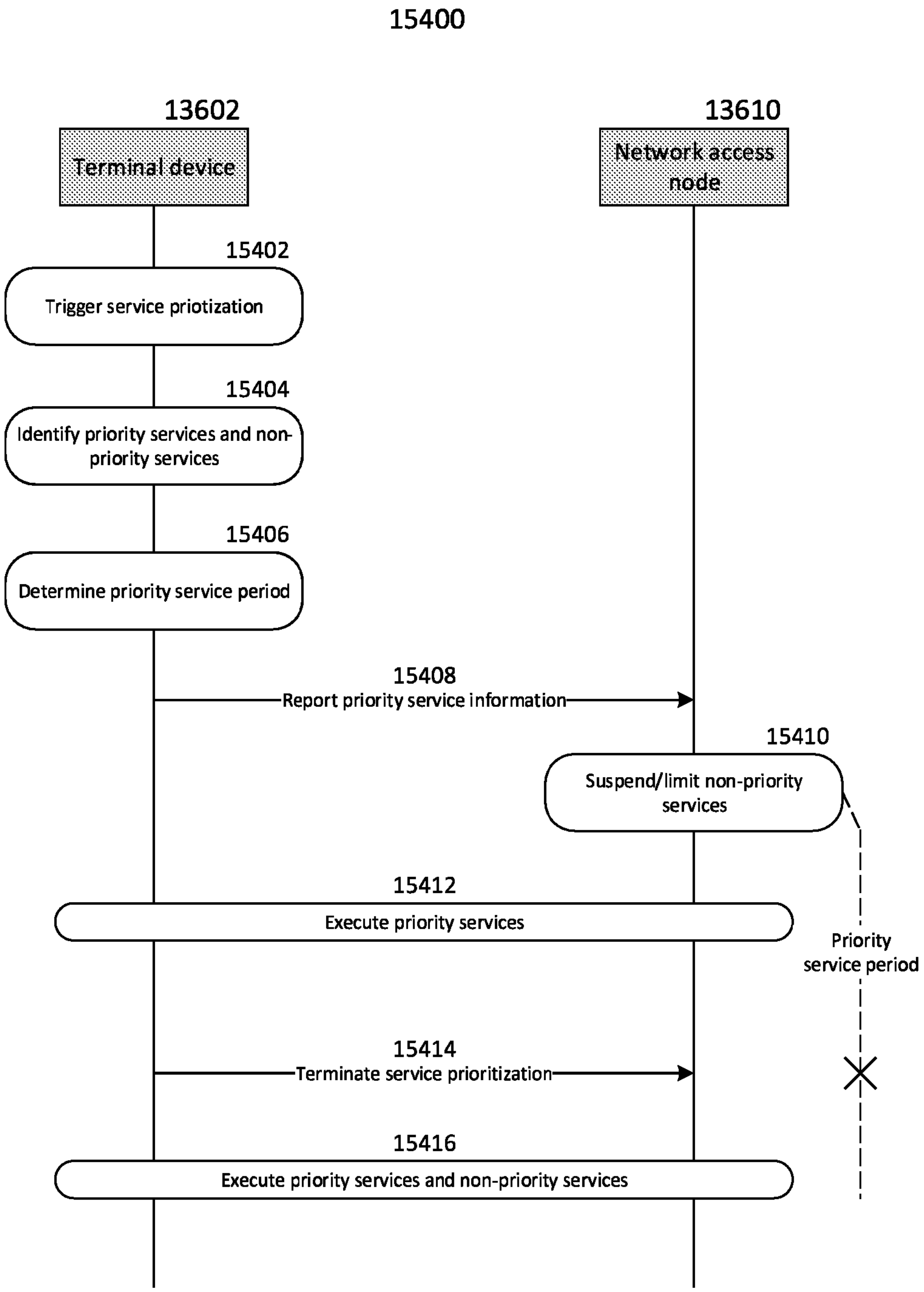
15400
13602
Terminal device
13610
Network access node
15402
Trigger service priotization
15404
Identify priority services and non-priority services
15406
Determine priority service period
15408
Report priority service information
15410
Suspend/limit non-priority services
15412
Execute priority services
Priority service period
15414
Terminate service prioritization
15416
Execute priority services and non-priority services

FIG 155

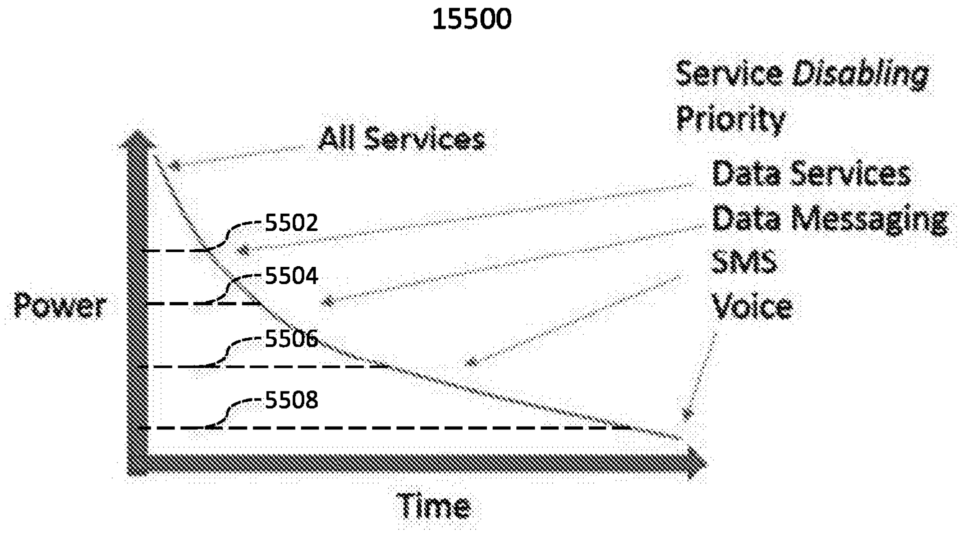
15500
Service *Disabling* Priority
All Services
Data Services
Data Messaging
SMS
Voice
5502
5504
5506
5508
Power
Time

FIG 156

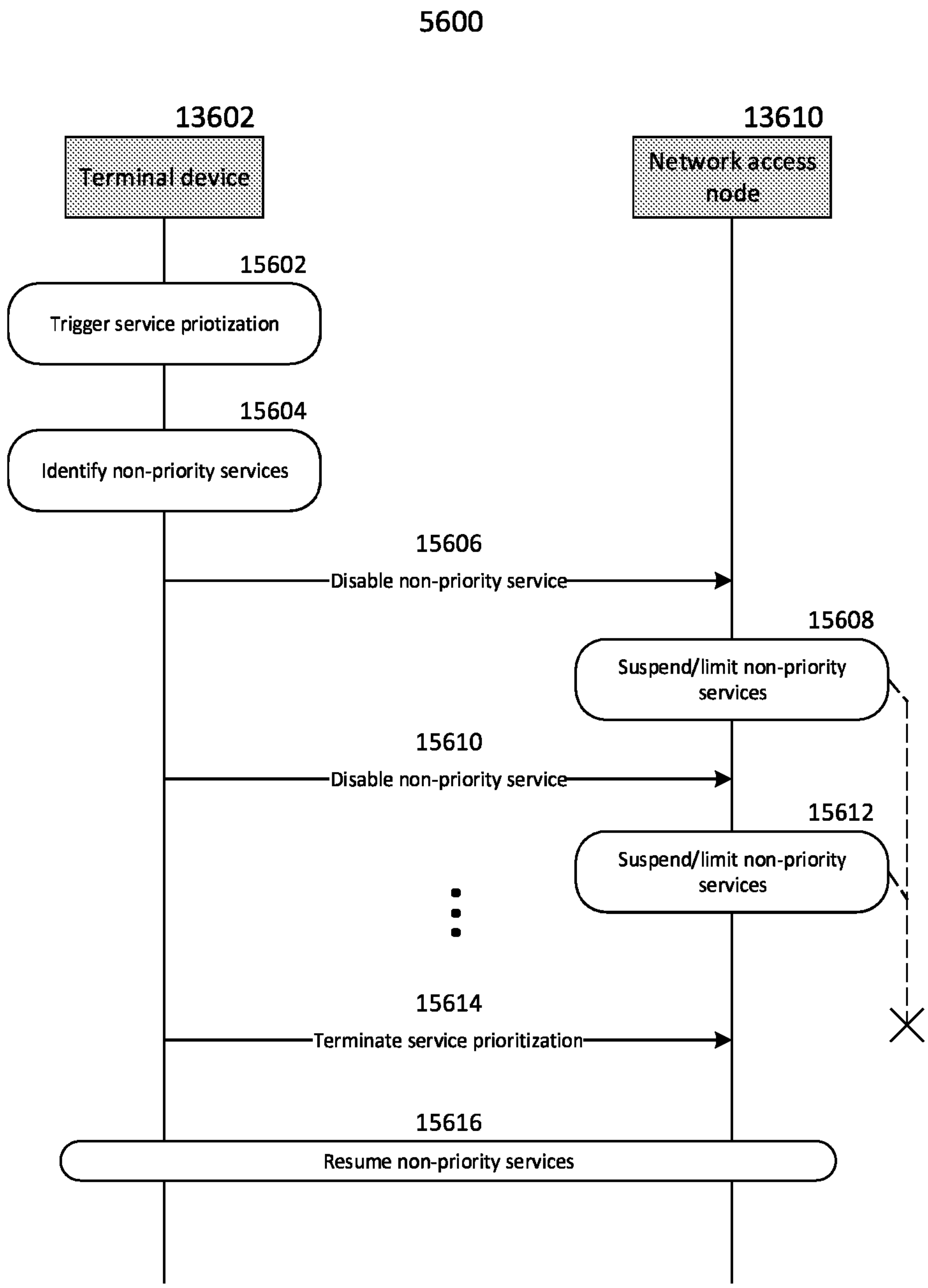
5600
13602
Terminal device
13610
Network access node
15602
Trigger service priotization
15604
Identify non-priority services
15606
Disable non-priority service
15608
Suspend/limit non-priority services
15610
Disable non-priority service
15612
Suspend/limit non-priority services
15614
Terminate service prioritization
15616
Resume non-priority services

FIG 157

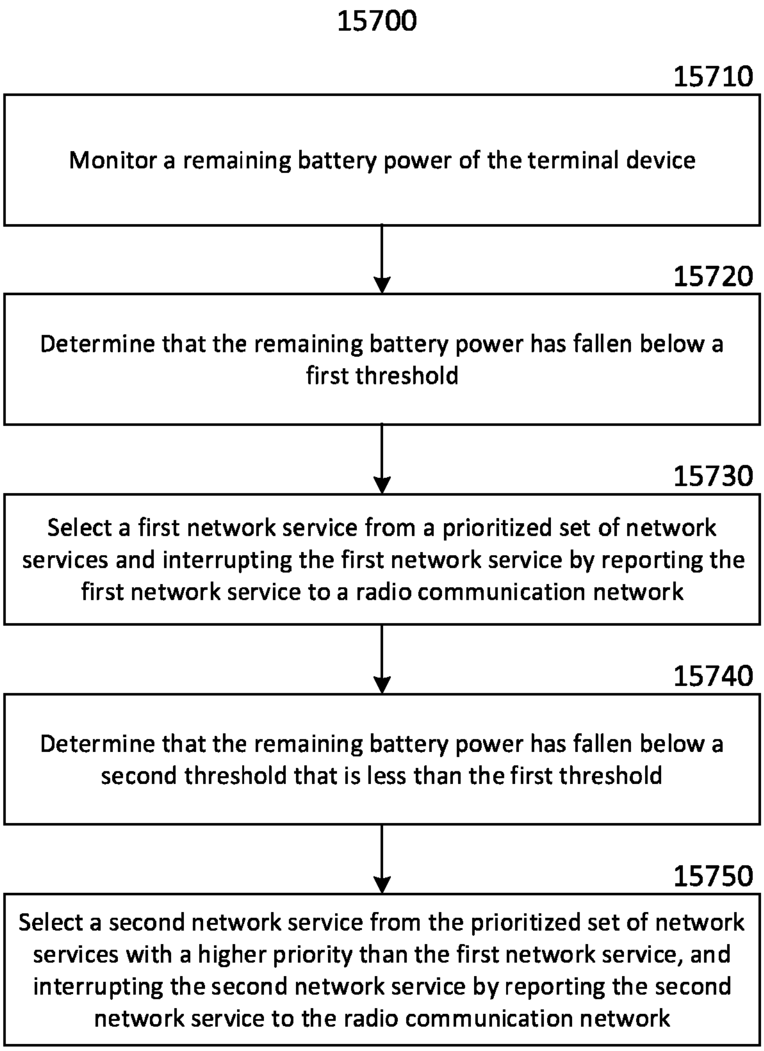
15700
15710
Monitor a remaining battery power of the terminal device
15720
Determine that the remaining battery power has fallen below a first threshold
15730
Select a first network service from a prioritized set of network services and interrupting the first network service by reporting the first network service to a radio communication network
15740
Determine that the remaining battery power has fallen below a second threshold that is less than the first threshold
15750
Select a second network service from the prioritized set of network services with a higher priority than the first network service, and interrupting the second network service by reporting the second network service to the radio communication network

FIG 158

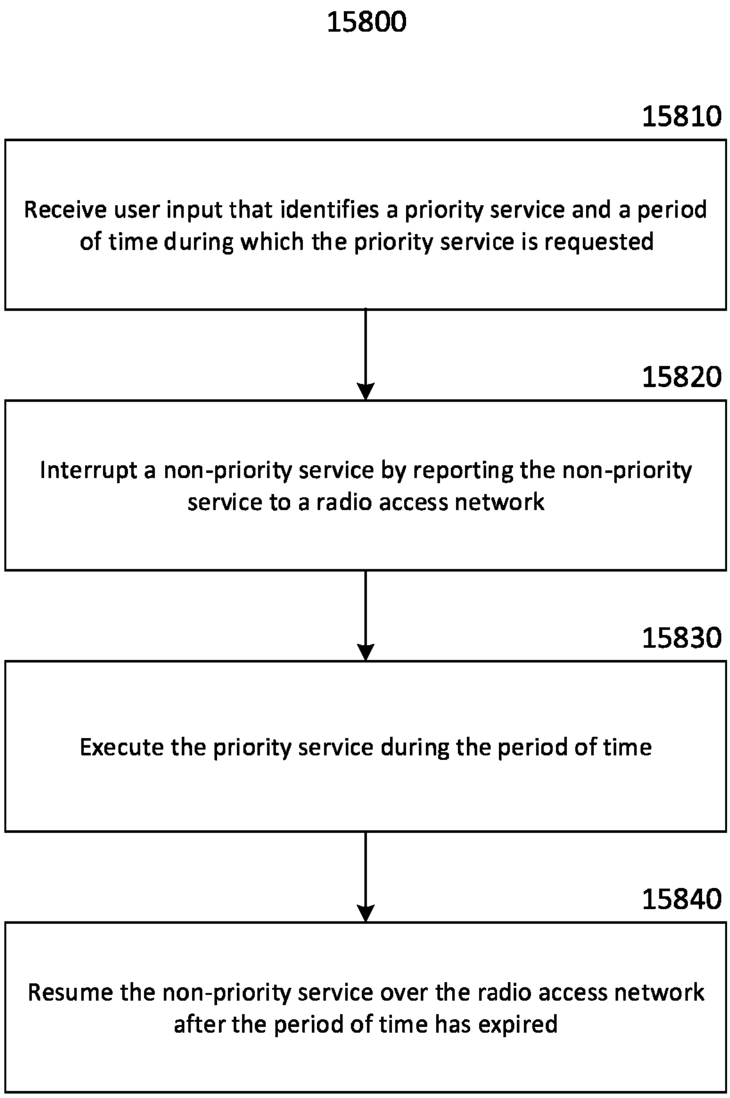
15800
15810
Receive user input that identifies a priority service and a period of time during which the priority service is requested
15820
Interrupt a non-priority service by reporting the non-priority service to a radio access network
15830
Execute the priority service during the period of time
15840
Resume the non-priority service over the radio access network after the period of time has expired

FIG 159

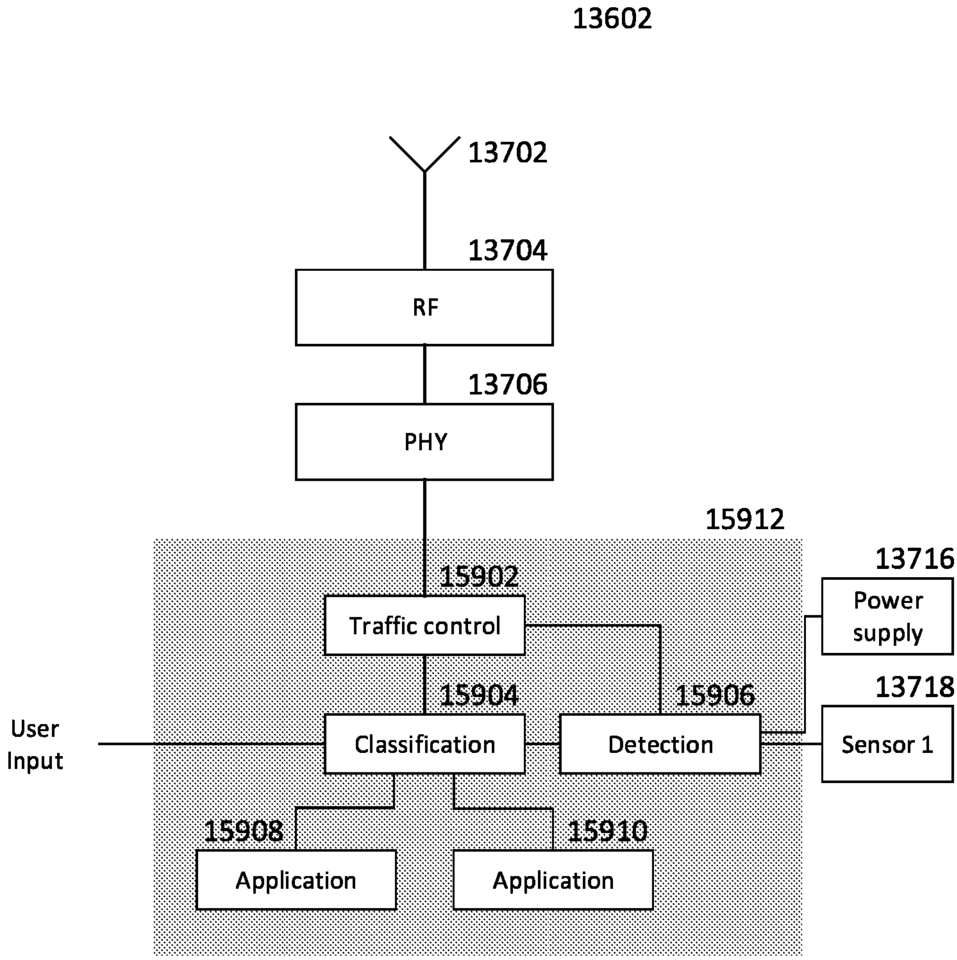
13602
13702
13704
RF
13706
PHY
15912
15902
Traffic control
13716
Power supply
15904
15906
13718
User Input
Classification
Detection
Sensor 1
15908
15910
Application
Application

FIG 160

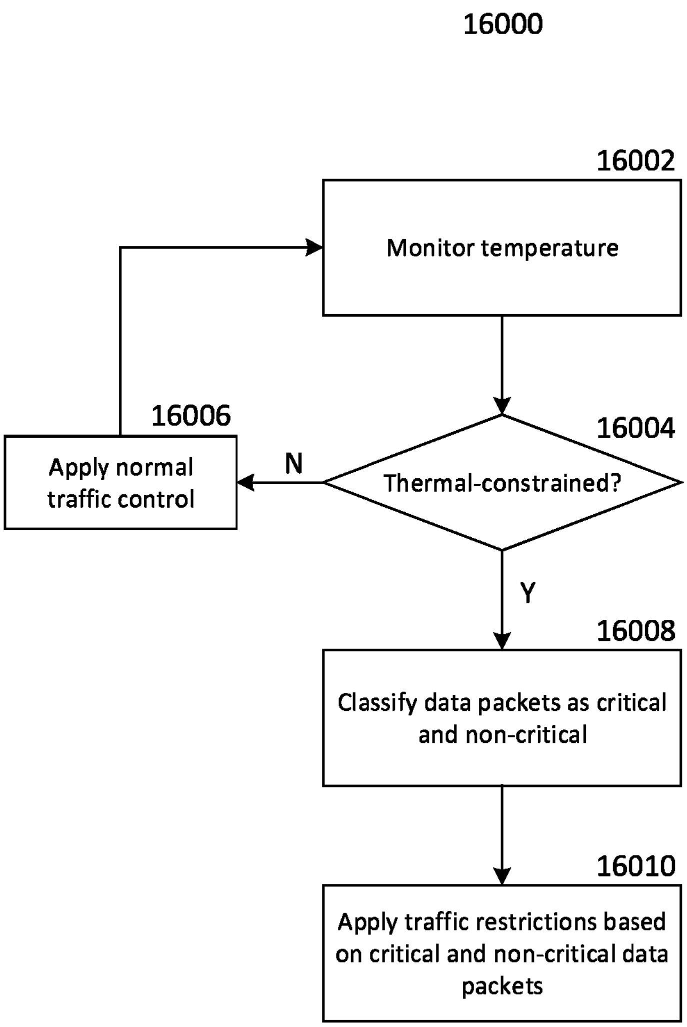
16000
16002
Monitor temperature
16004
Thermal-constrained?
N
16006
Apply normal traffic control
Y
16008
Classify data packets as critical and non-critical
16010
Apply traffic restrictions based on critical and non-critical data packets

FIG 161

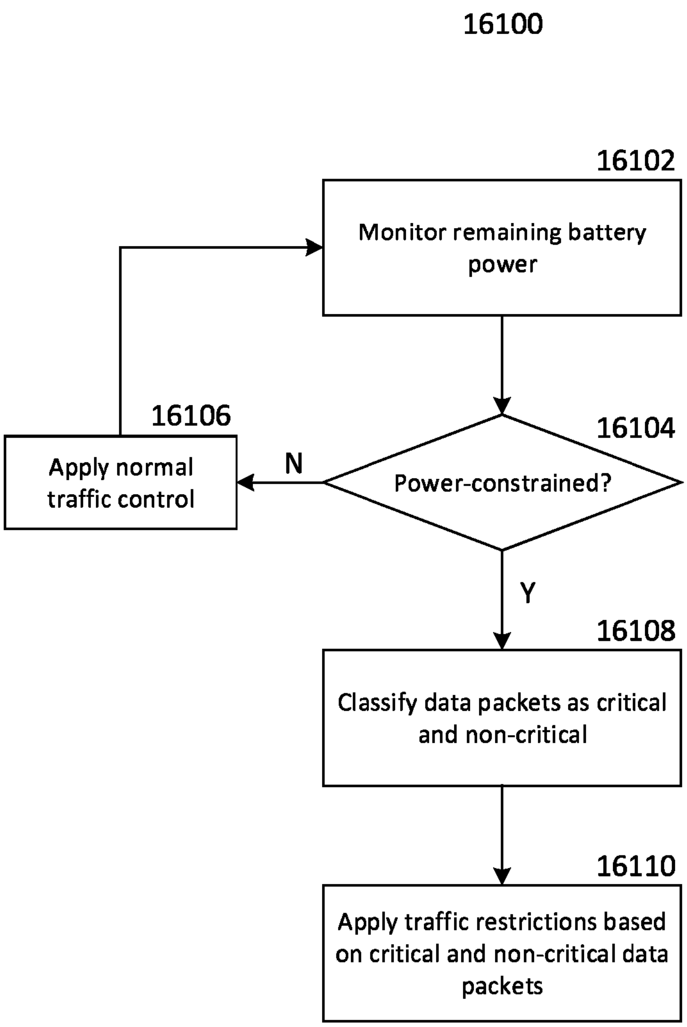
16100
16102
Monitor remaining battery power
16104
Power-constrained?
N
16106
Apply normal traffic control
Y
16108
Classify data packets as critical and non-critical
16110
Apply traffic restrictions based on critical and non-critical data packets

FIG 162

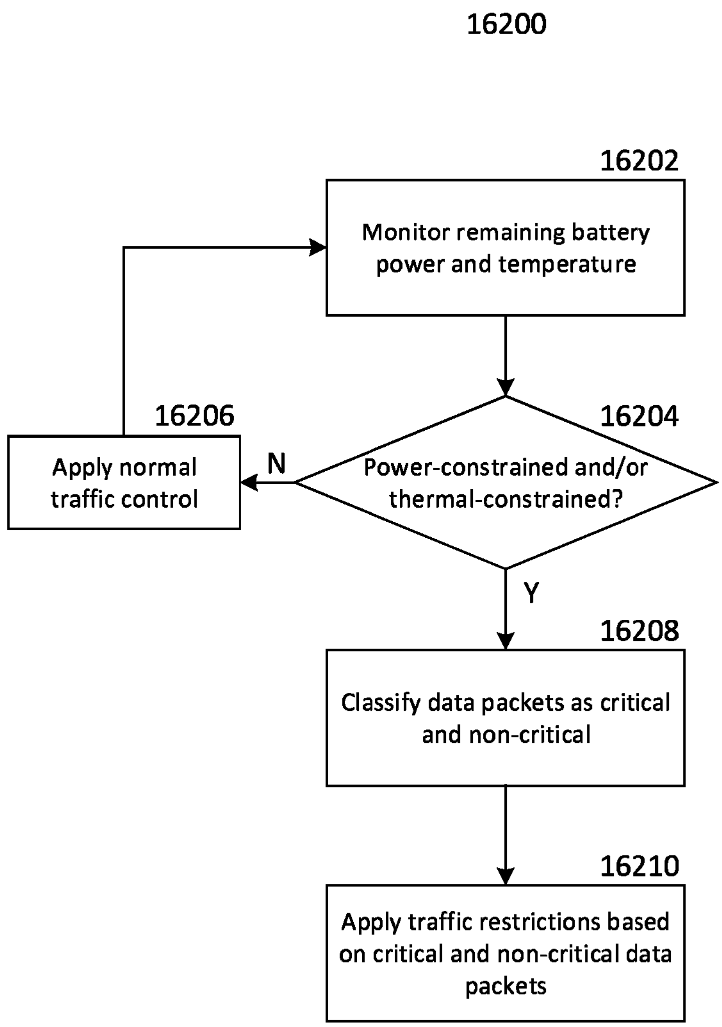
16200
16202
Monitor remaining battery power and temperature
16204
Power-constrained and/or thermal-constrained?
N
16206
Apply normal traffic control
Y
16208
Classify data packets as critical and non-critical
16210
Apply traffic restrictions based on critical and non-critical data packets

FIG 163

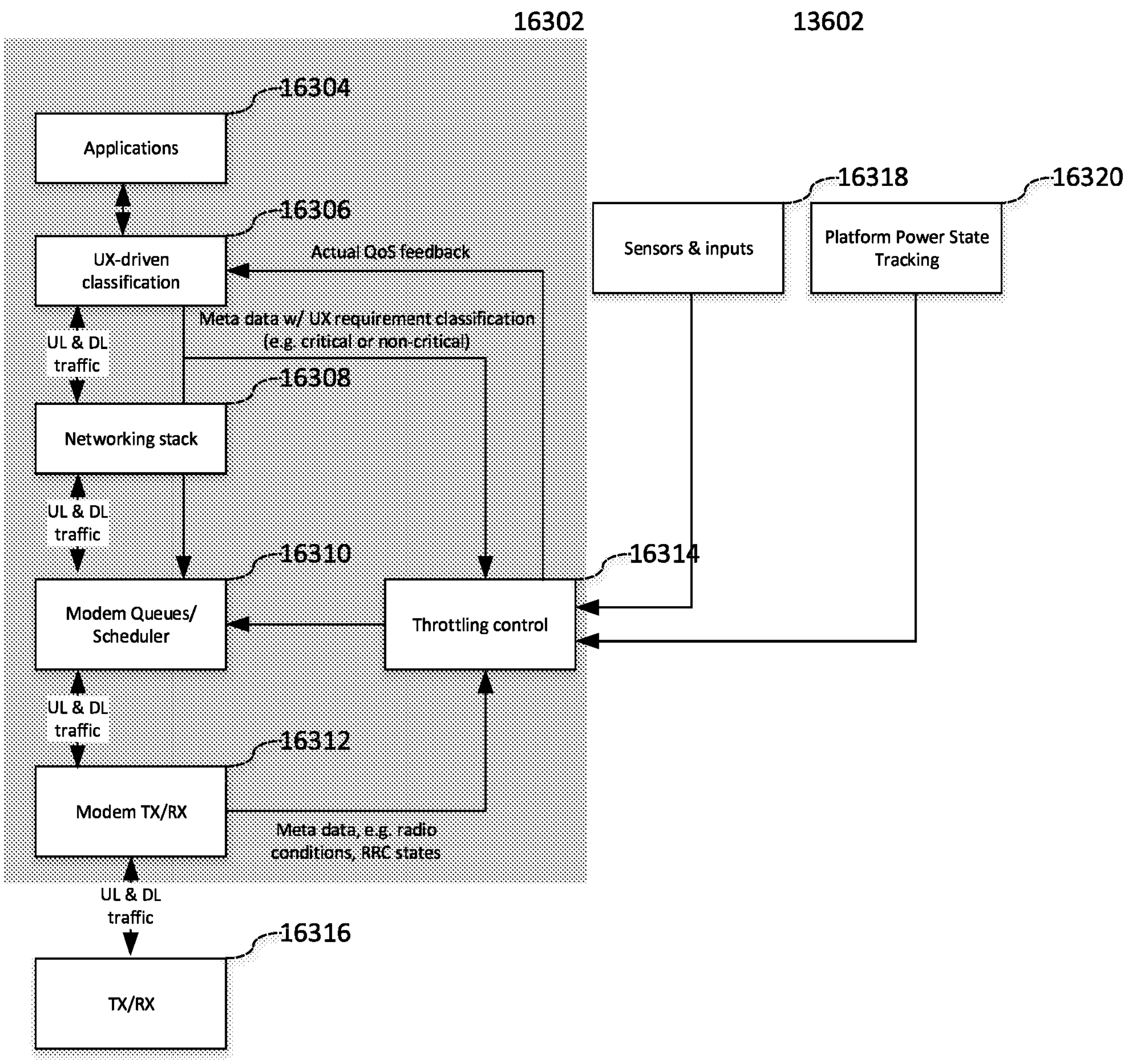
16302
13602
16304
Applications
16306
UX-driven classification
Actual QoS feedback
Meta data w/ UX requirement classification (e.g. critical or non-critical)
UL & DL traffic
16308
Networking stack
UL & DL traffic
16310
Modem Queues/ Scheduler
Throttling control
16314
16318
Sensors & inputs
16320
Platform Power State Tracking
UL & DL traffic
16312
Modem TX/RX
Meta data, e.g. radio conditions, RRC states
UL & DL traffic
16316
TX/RX

FIG 164

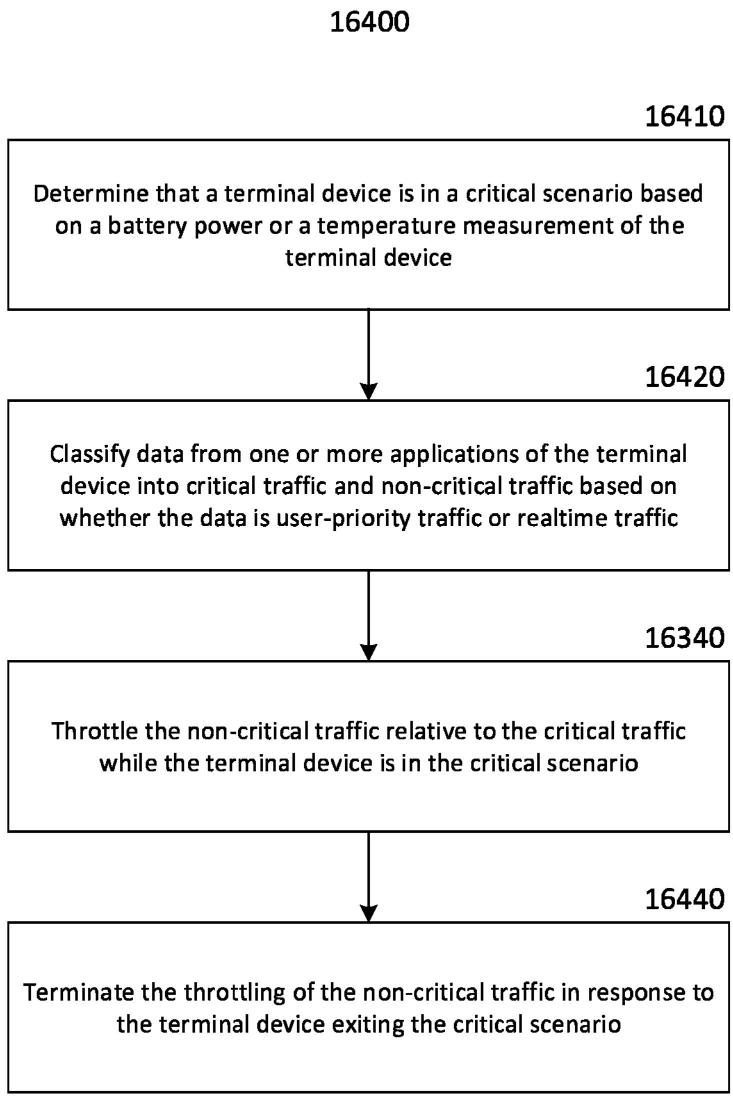
16400
16410
Determine that a terminal device is in a critical scenario based on a battery power or a temperature measurement of the terminal device
16420
Classify data from one or more applications of the terminal device into critical traffic and non-critical traffic based on whether the data is user-priority traffic or realtime traffic
16340
Throttle the non-critical traffic relative to the critical traffic while the terminal device is in the critical scenario
16440
Terminate the throttling of the non-critical traffic in response to the terminal device exiting the critical scenario

FIG 165

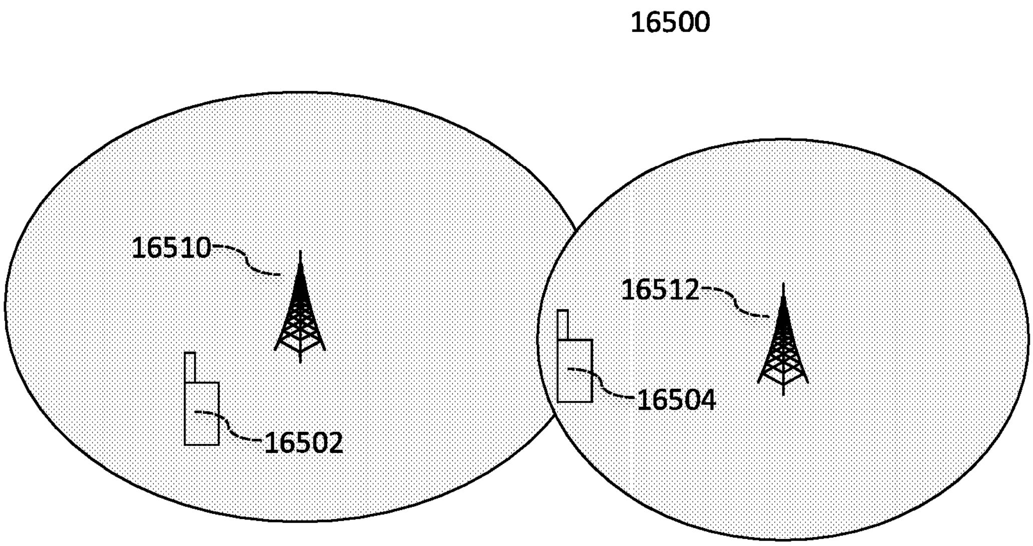

FIG 166

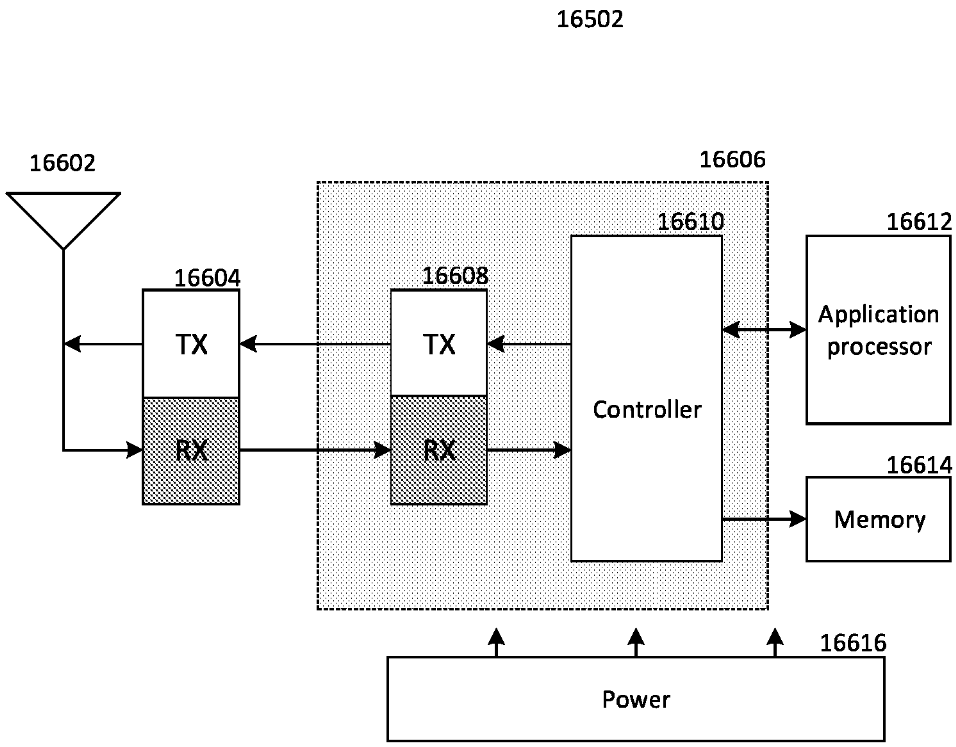
16502
16602
16606
16610
16612
16604
16608
TX
TX
Application processor
Controller
RX
RX
16614
Memory
16616
Power

FIG 167

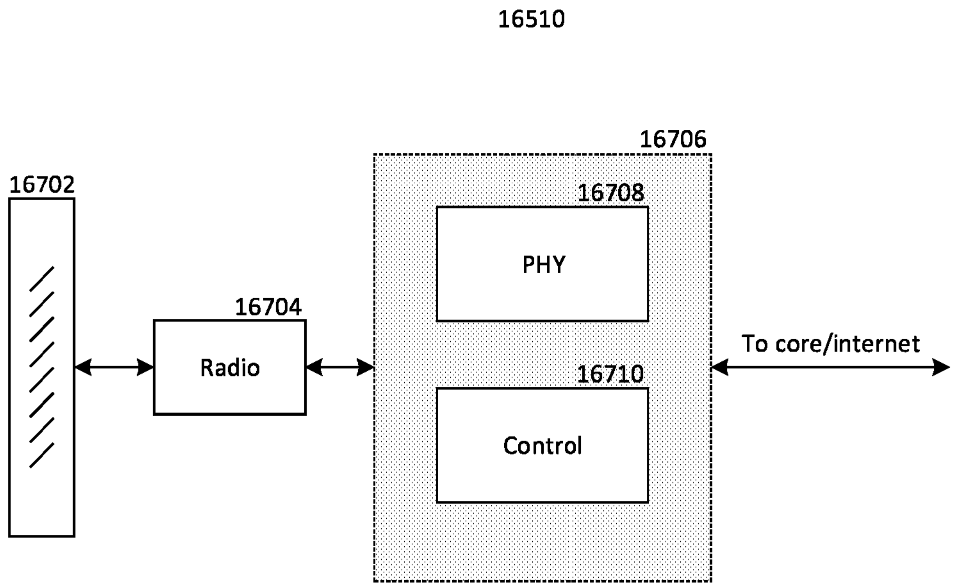
16510
16706
16702
16708
PHY
16704
Radio
To core/internet
16710
Control

FIG 168

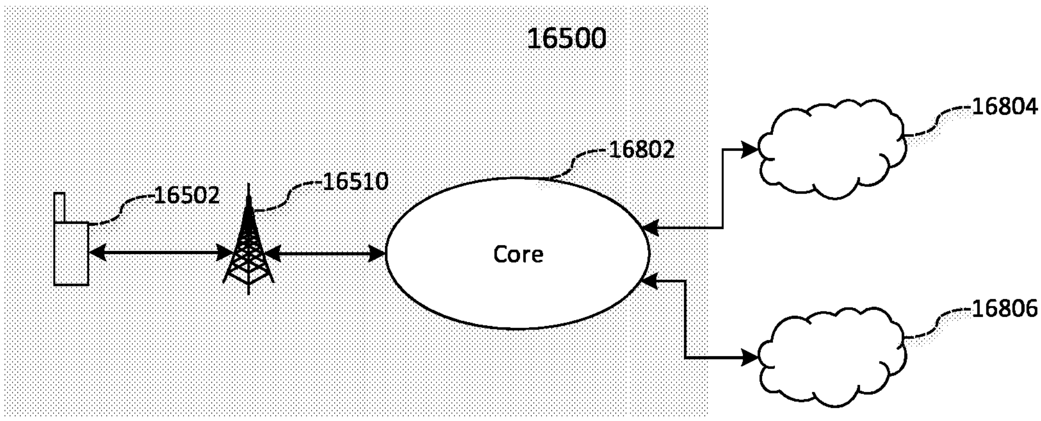

FIG 169

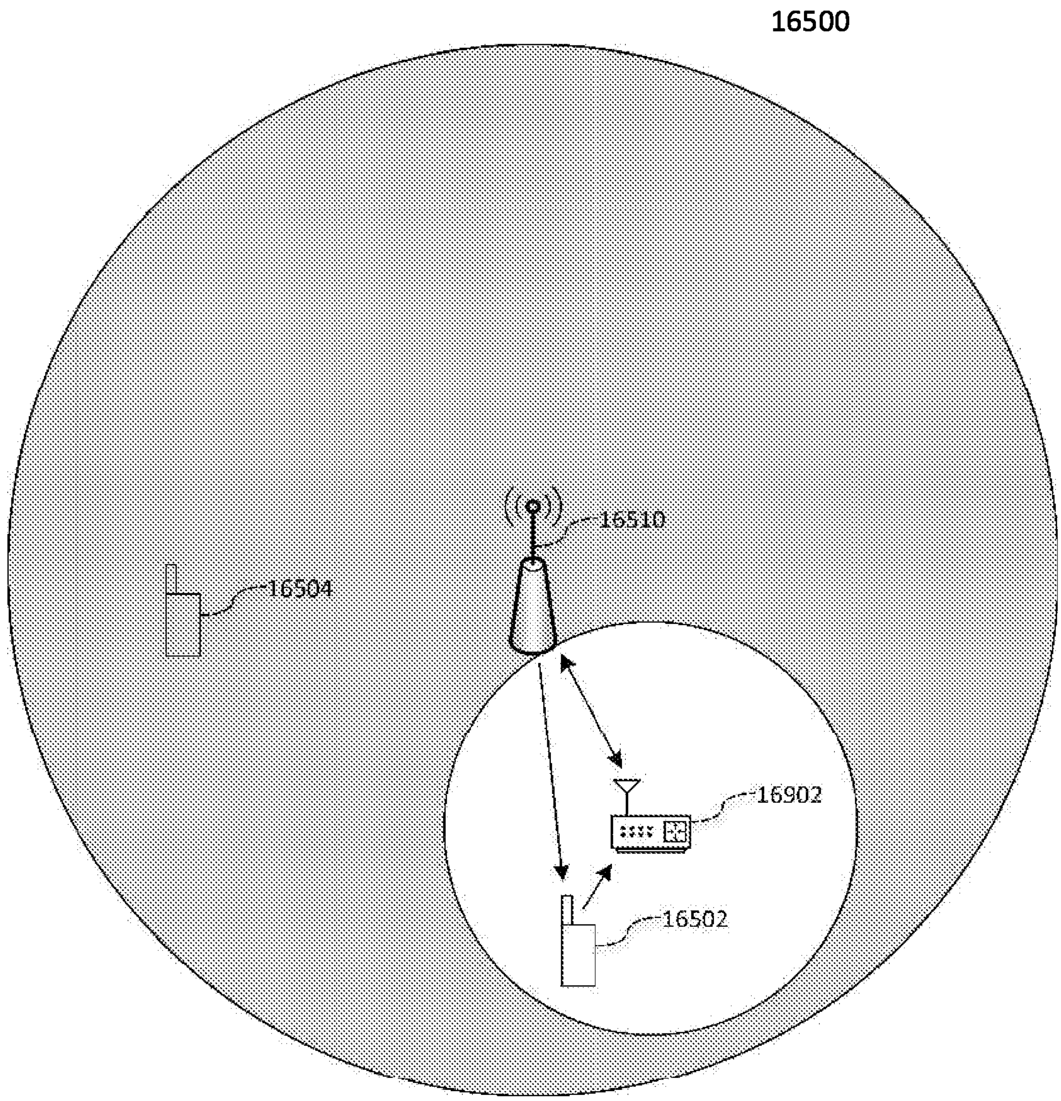

FIG 170

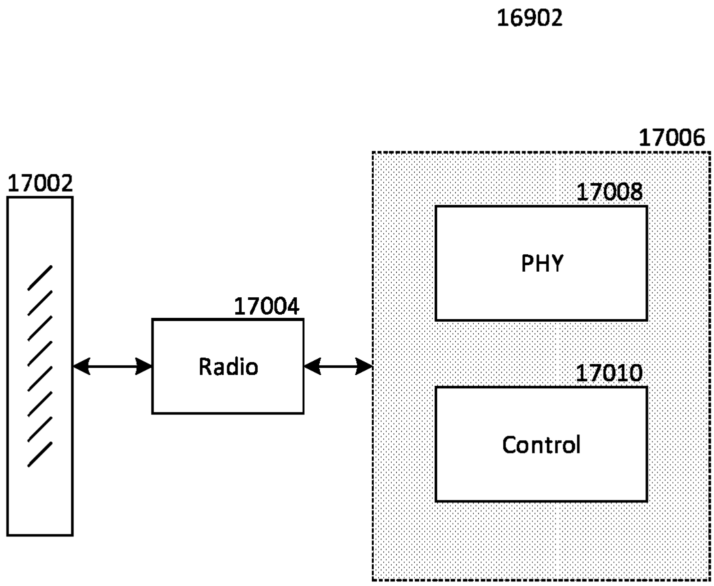

FIG 171

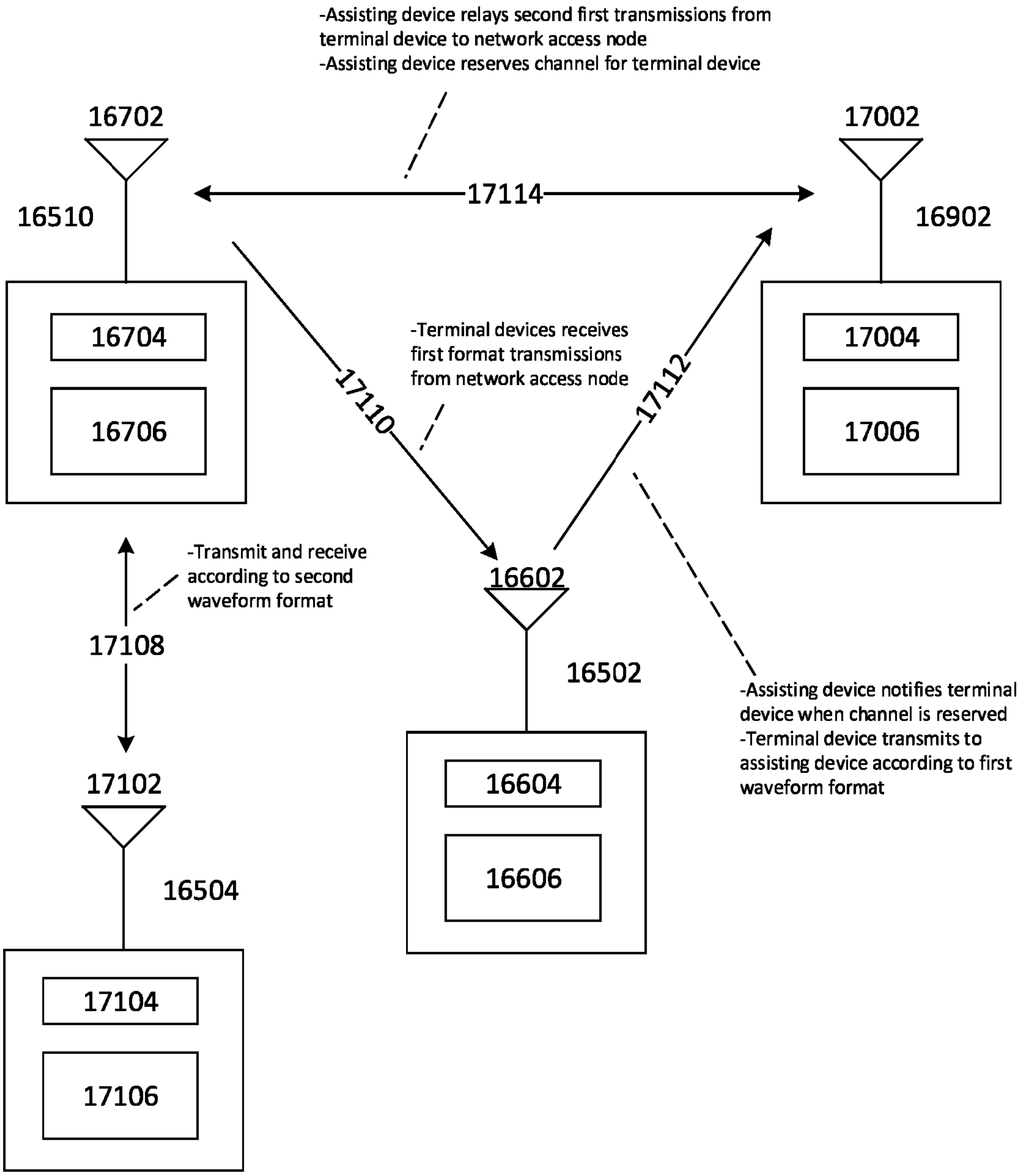
-Assisting device relays second first transmissions from
terminal device to network access node
-Assisting device reserves channel for terminal device
16702
17002
16510
17114
16902
16704
16706
17004
17006
-Terminal devices receives
first format transmissions
from network access node
17110
17112
-Transmit and receive
according to second
waveform format
16602
17108
16502
-Assisting device notifies terminal
device when channel is reserved
-Terminal device transmits to
assisting device according to first
waveform format
17102
16604
16606
16504
17104
17106

FIG 172

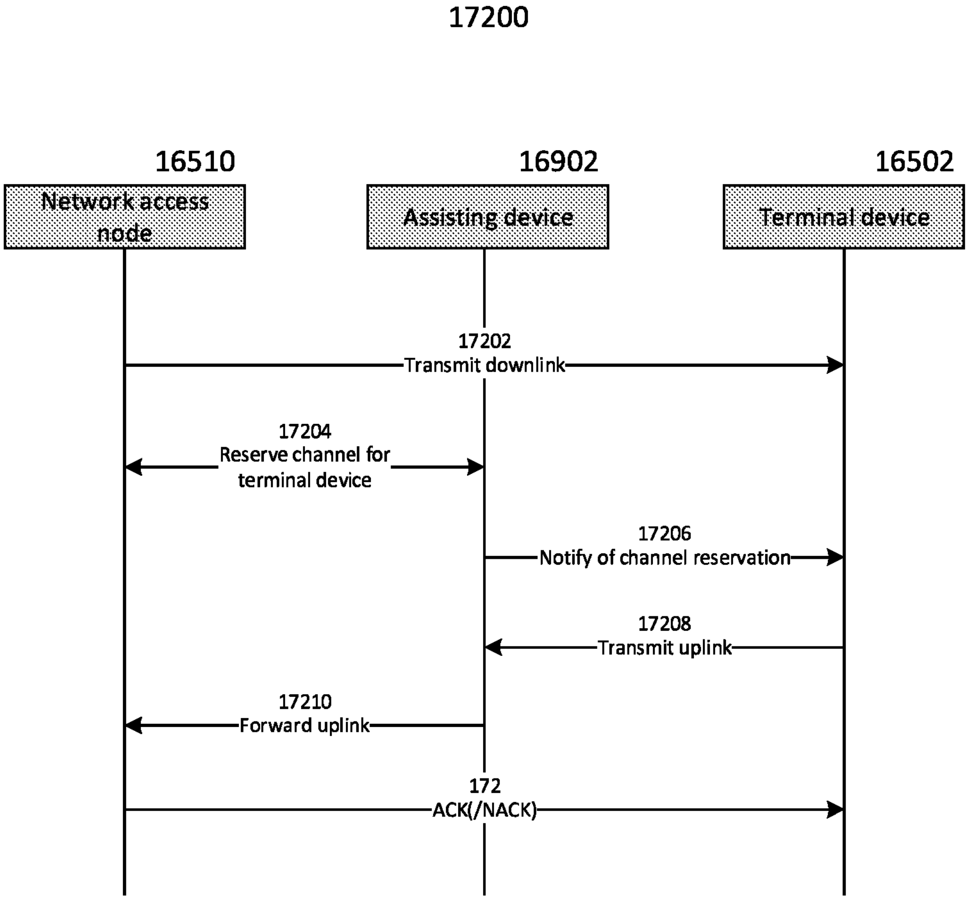
17200
16510
Network access node
16902
Assisting device
16502
Terminal device
17202
Transmit downlink
17204
Reserve channel for terminal device
17206
Notify of channel reservation
17208
Transmit uplink
17210
Forward uplink
172
ACK(/NACK)

FIG 173

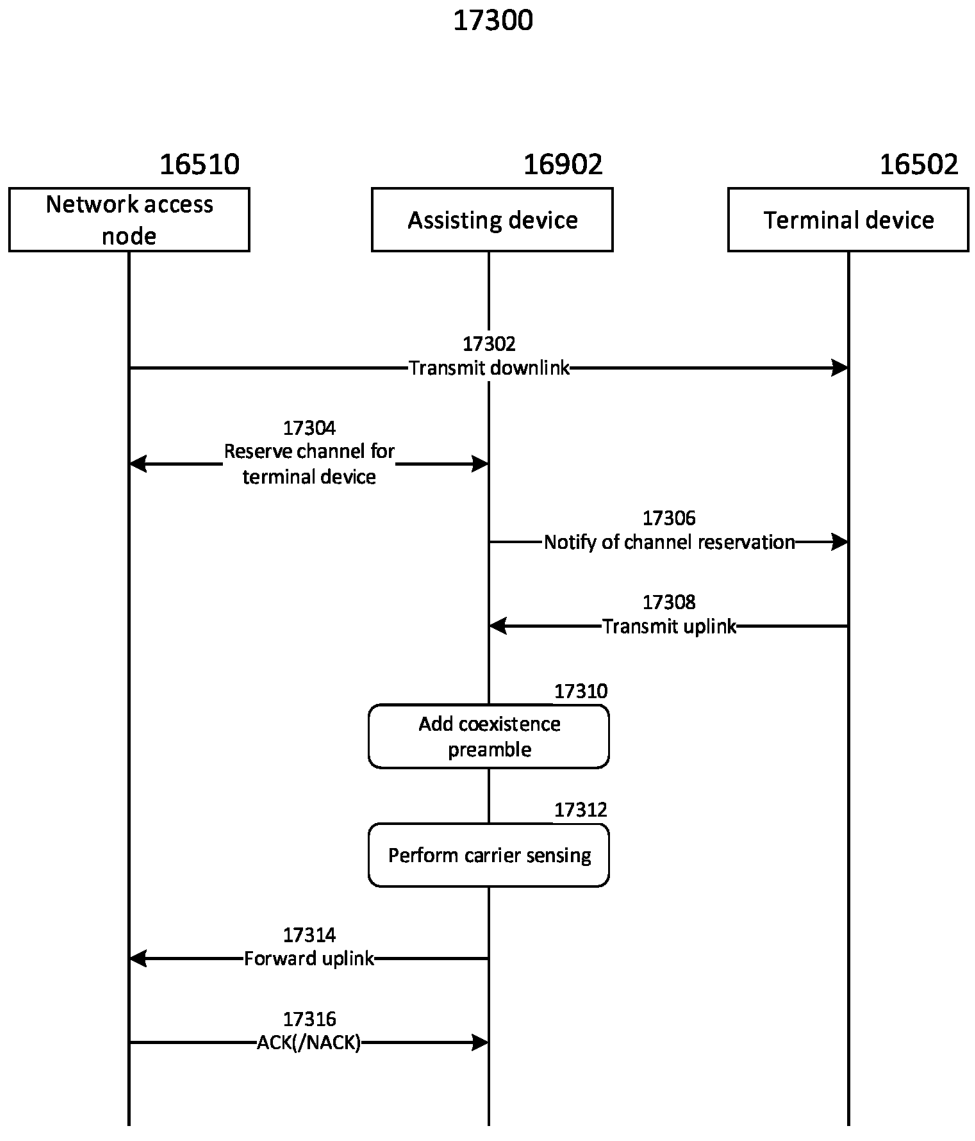
17300
16510
Network access node
16902
Assisting device
16502
Terminal device
17302
Transmit downlink
17304
Reserve channel for terminal device
17306
Notify of channel reservation
17308
Transmit uplink
17310
Add coexistence preamble
17312
Perform carrier sensing
17314
Forward uplink
17316
ACK(/NACK)

FIG 174

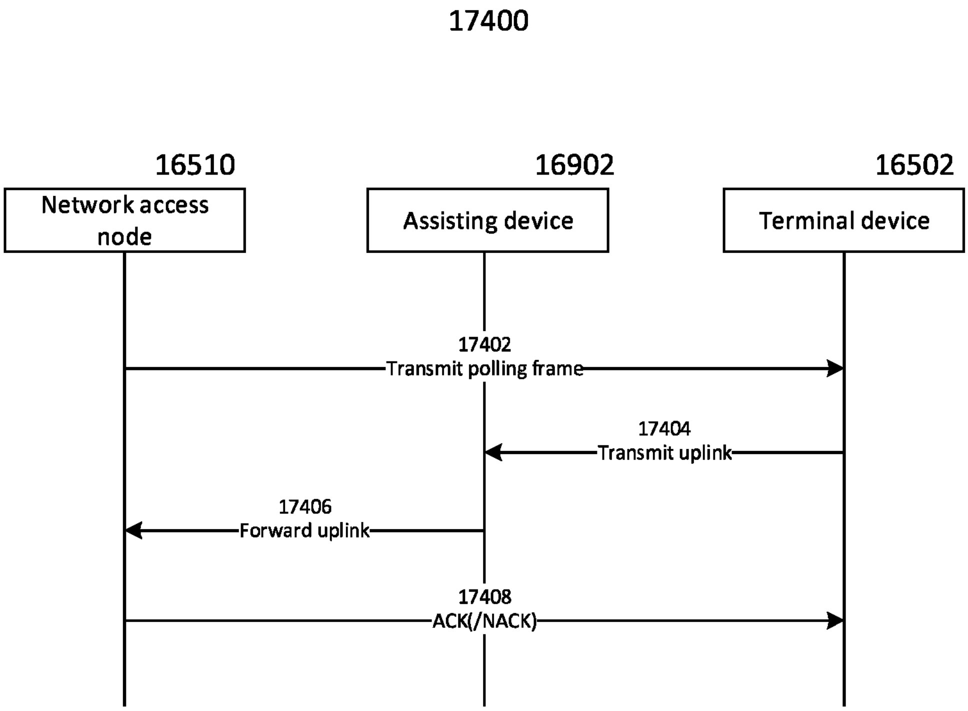
17400
16510
Network access node
16902
Assisting device
16502
Terminal device
17402
Transmit polling frame
17404
Transmit uplink
17406
Forward uplink
17408
ACK(/NACK)

FIG 175

17500

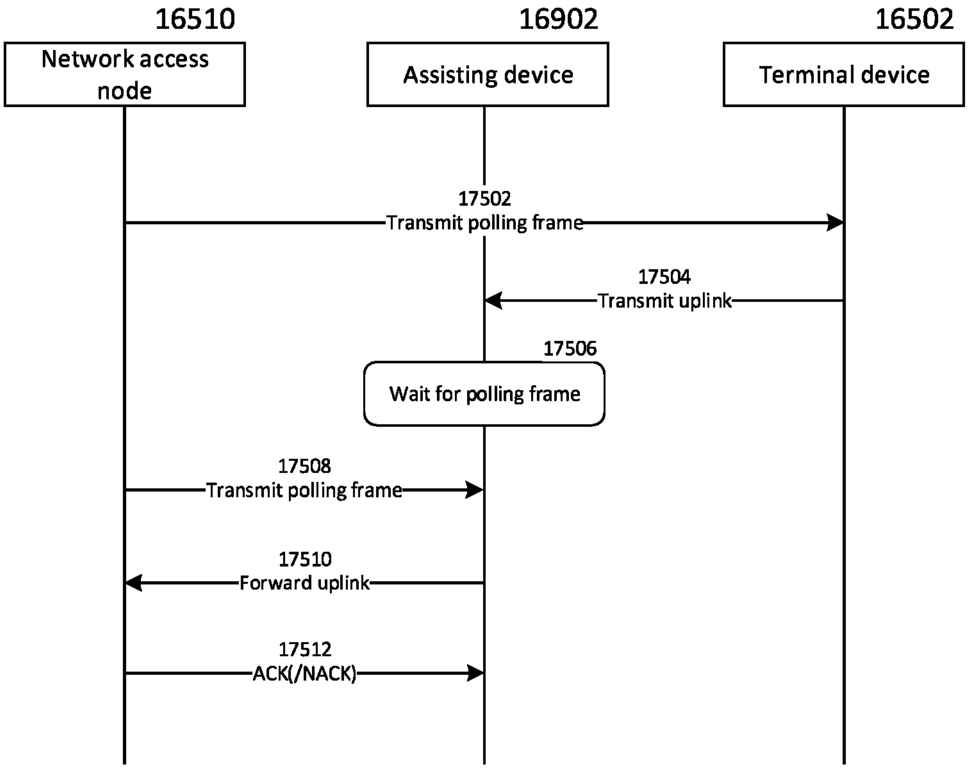

FIG 176

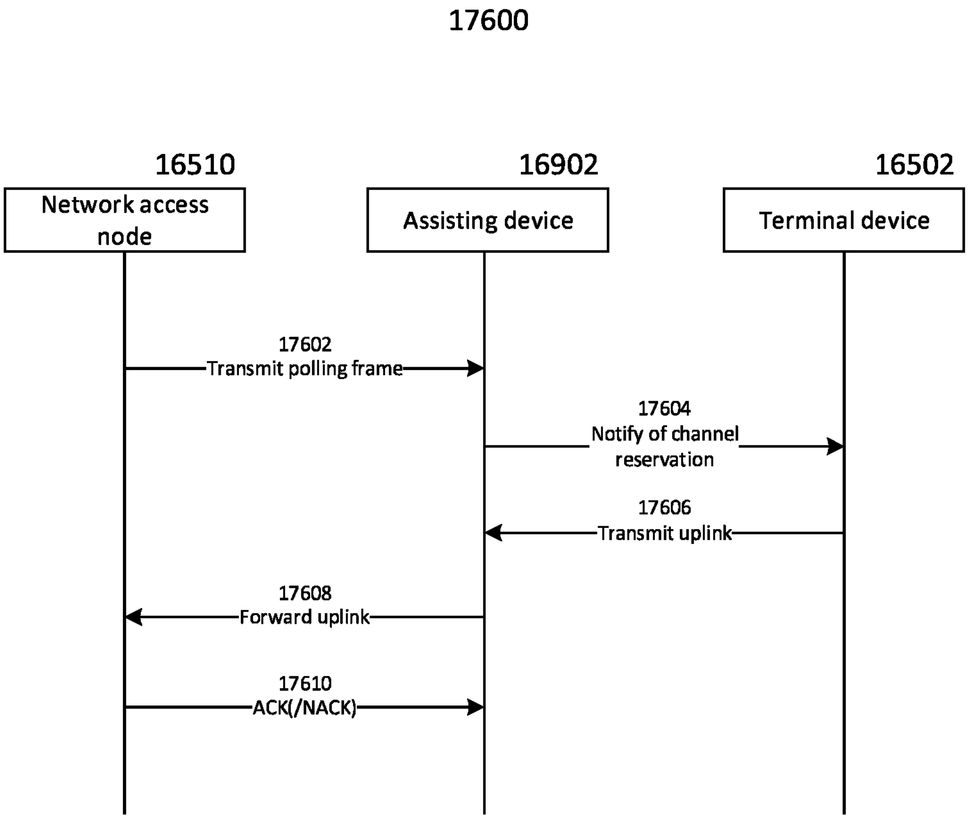
17600
16510
Network access node
16902
Assisting device
16502
Terminal device
17602
Transmit polling frame
17604
Notify of channel reservation
17606
Transmit uplink
17608
Forward uplink
17610
ACK(/NACK)

FIG 177

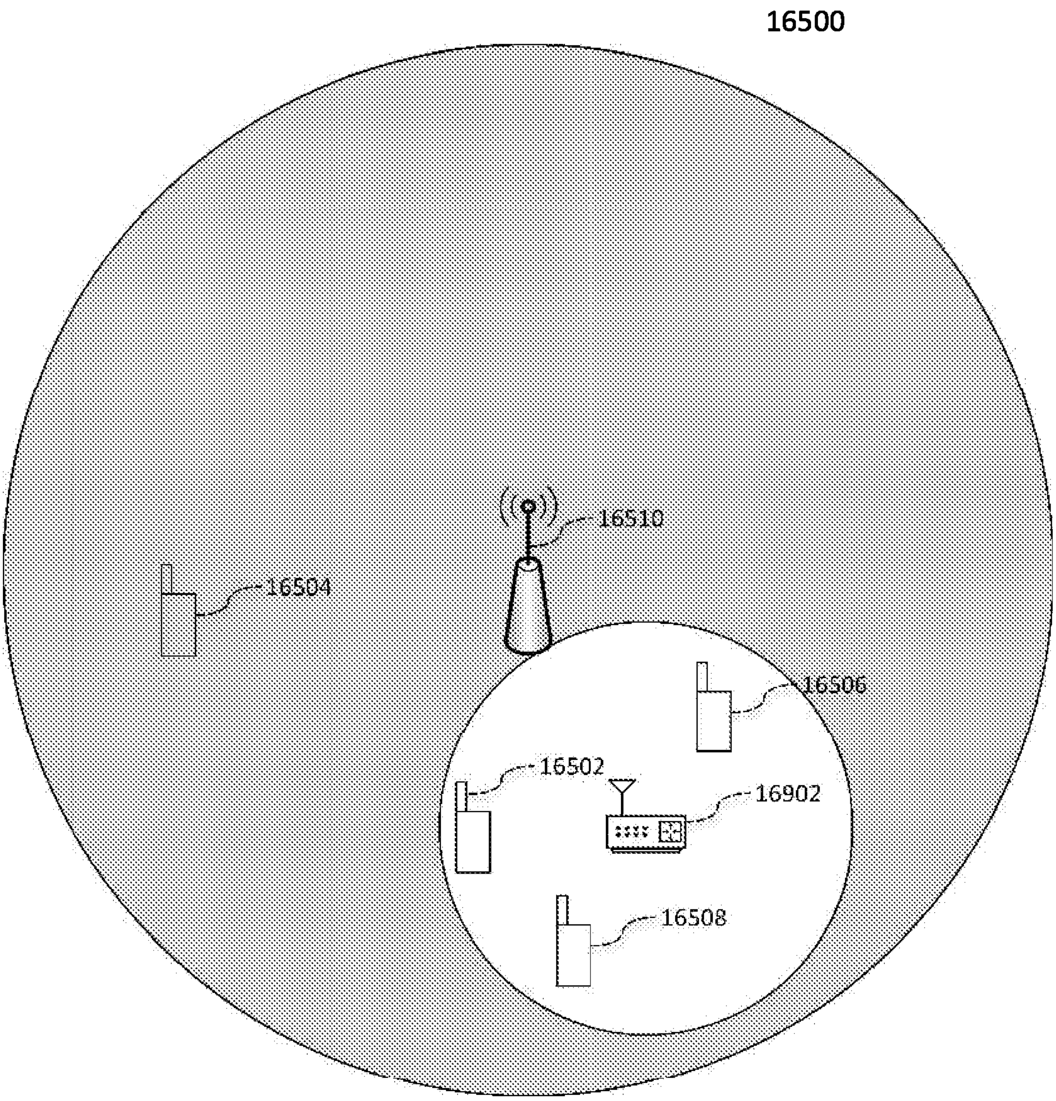

FIG 178

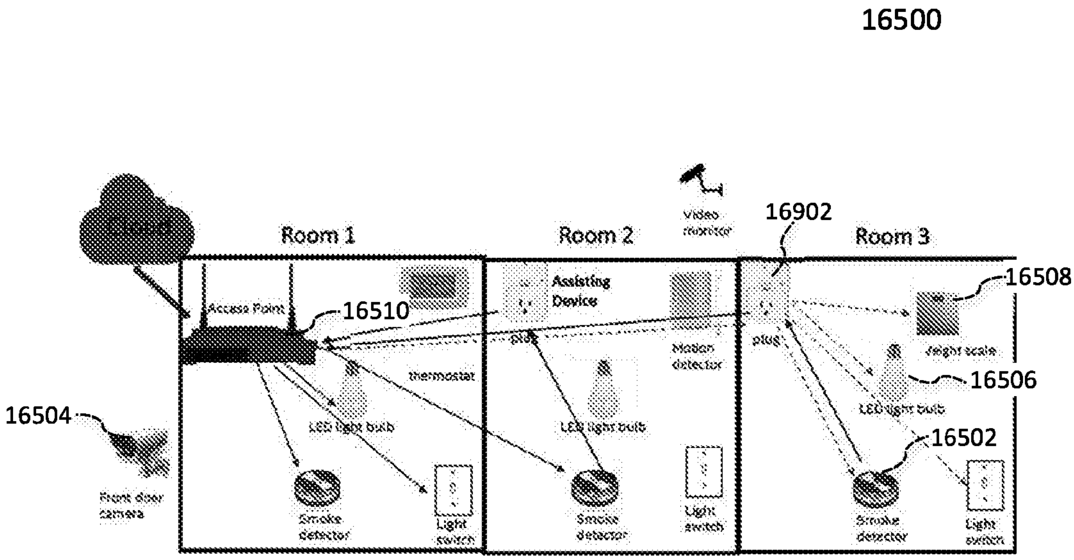
16500
Room 1
Room 2
Room 3
Video monitor
16902
16508
Access Point
16510
Assisting Device
plug
Motion detector
thermostat
Weight scale
16506
LED light bulb
LED light bulb
LED light bulb
16504
16502
Front door camera
Smoke detector
Light switch
Smoke detector
Light switch
Smoke detector
Light switch

FIG 179

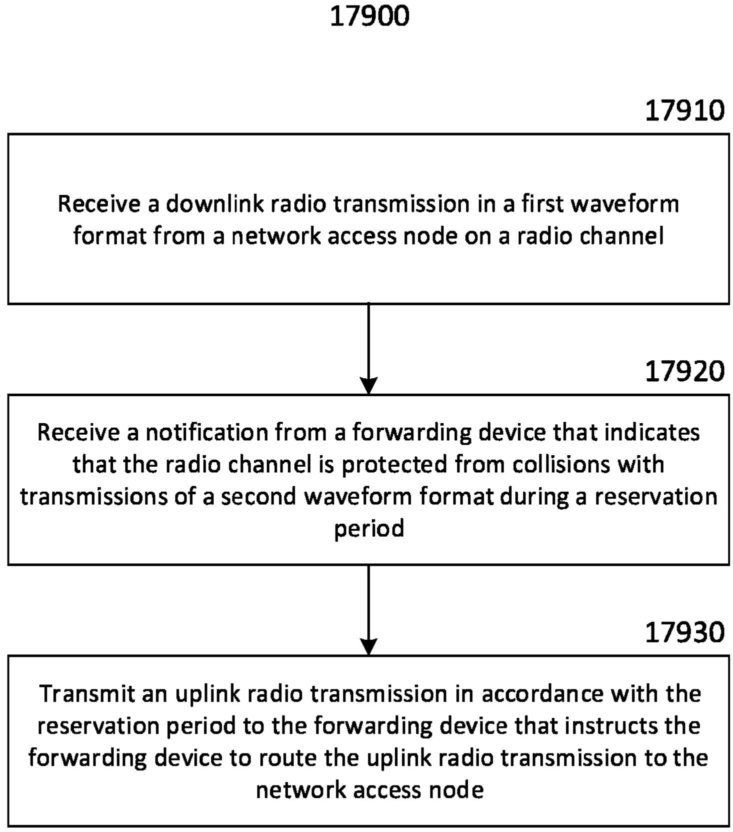
17900
17910
Receive a downlink radio transmission in a first waveform format from a network access node on a radio channel
17920
Receive a notification from a forwarding device that indicates that the radio channel is protected from collisions with transmissions of a second waveform format during a reservation period
17930
Transmit an uplink radio transmission in accordance with the reservation period to the forwarding device that instructs the forwarding device to route the uplink radio transmission to the network access node

FIG 180

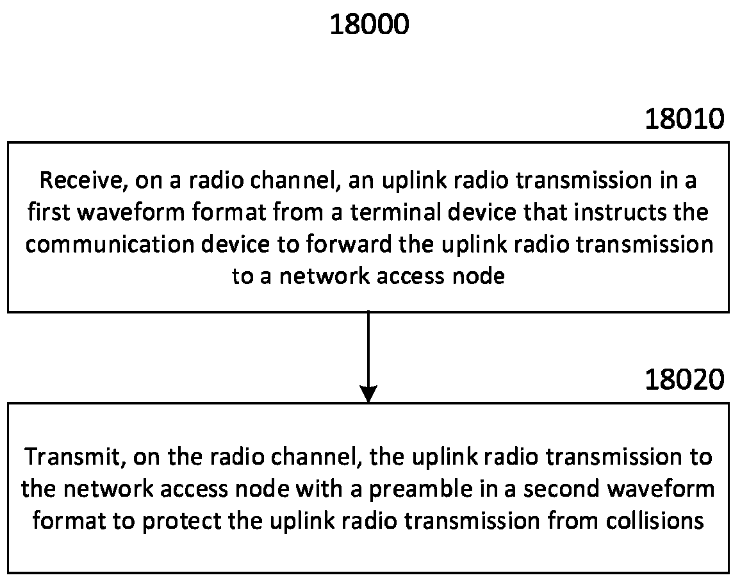
18000
18010
Receive, on a radio channel, an uplink radio transmission in a first waveform format from a terminal device that instructs the communication device to forward the uplink radio transmission to a network access node
18020
Transmit, on the radio channel, the uplink radio transmission to the network access node with a preamble in a second waveform format to protect the uplink radio transmission from collisions

FIG 181

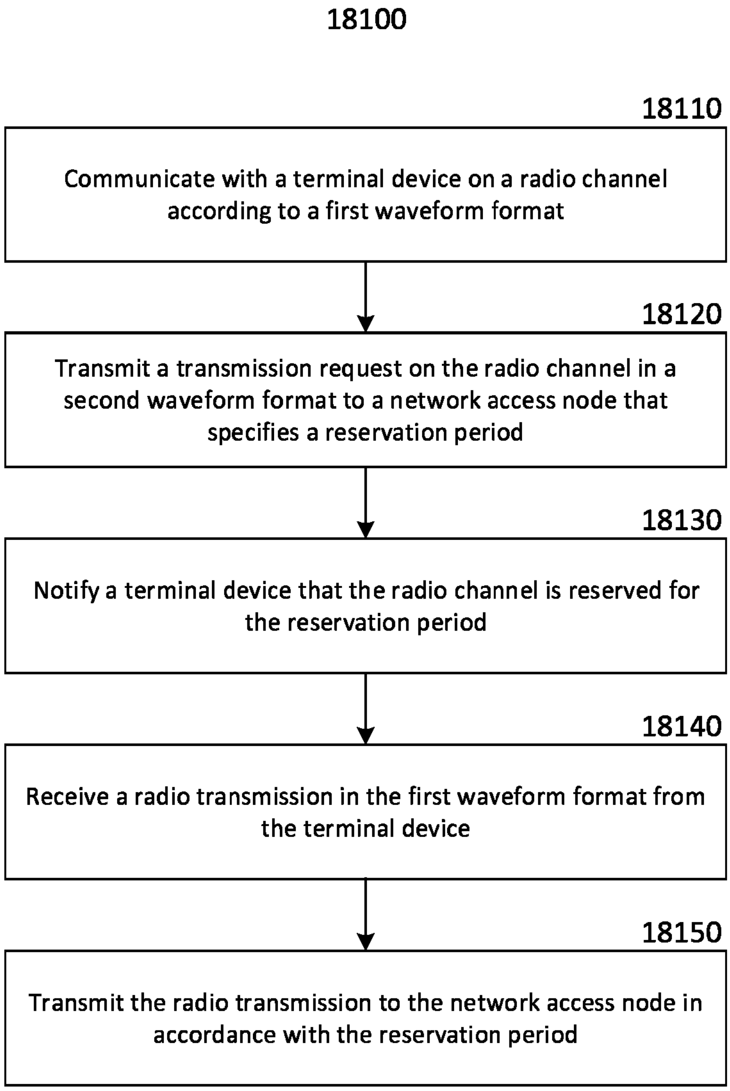
18100
18110
Communicate with a terminal device on a radio channel according to a first waveform format
18120
Transmit a transmission request on the radio channel in a second waveform format to a network access node that specifies a reservation period
18130
Notify a terminal device that the radio channel is reserved for the reservation period
18140
Receive a radio transmission in the first waveform format from the terminal device
18150
Transmit the radio transmission to the network access node in accordance with the reservation period

FIG 182

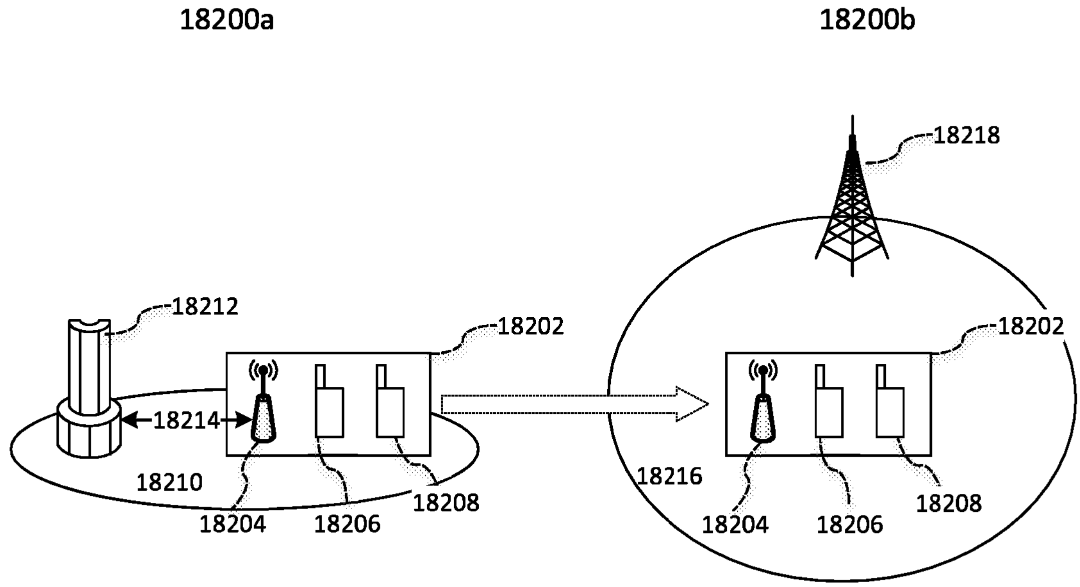
18200a
18200b
18218
18212
18202
18214
18210
18204
18206
18208
18202
18216
18204
18206
18208

FIG 183

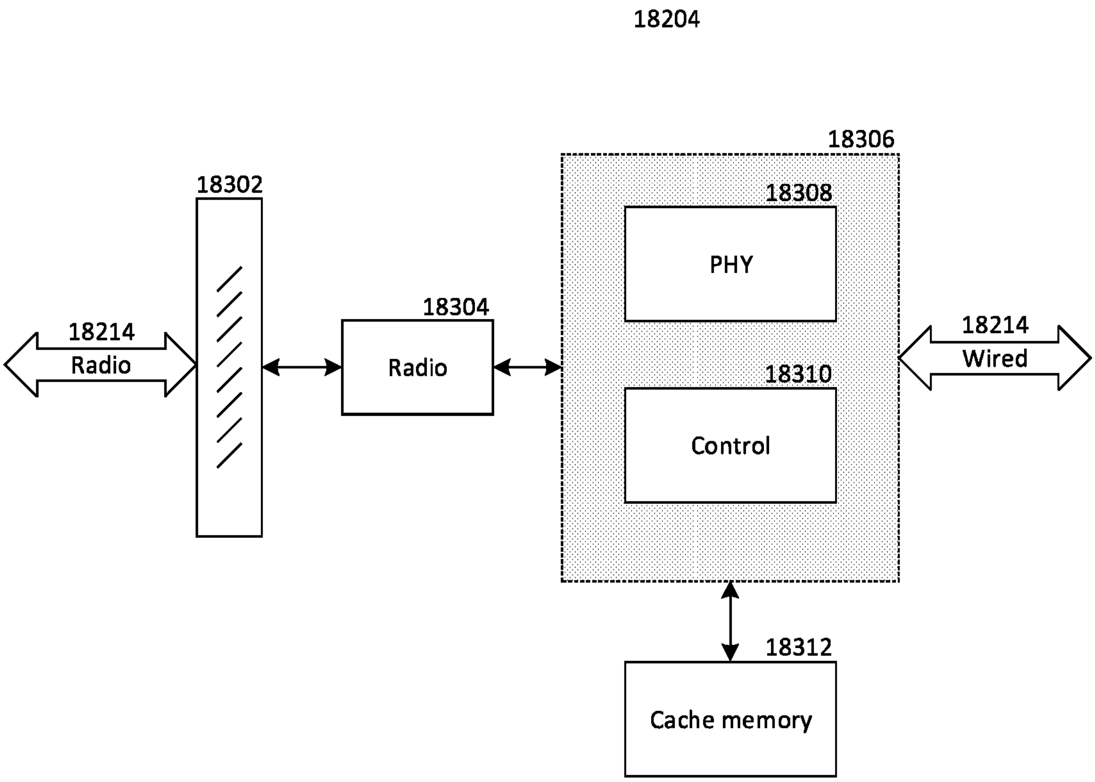
18204
18306
18302
18308
PHY
18304
18214
Radio
Radio
18214
Wired
18310
Control
18312
Cache memory

FIG 184

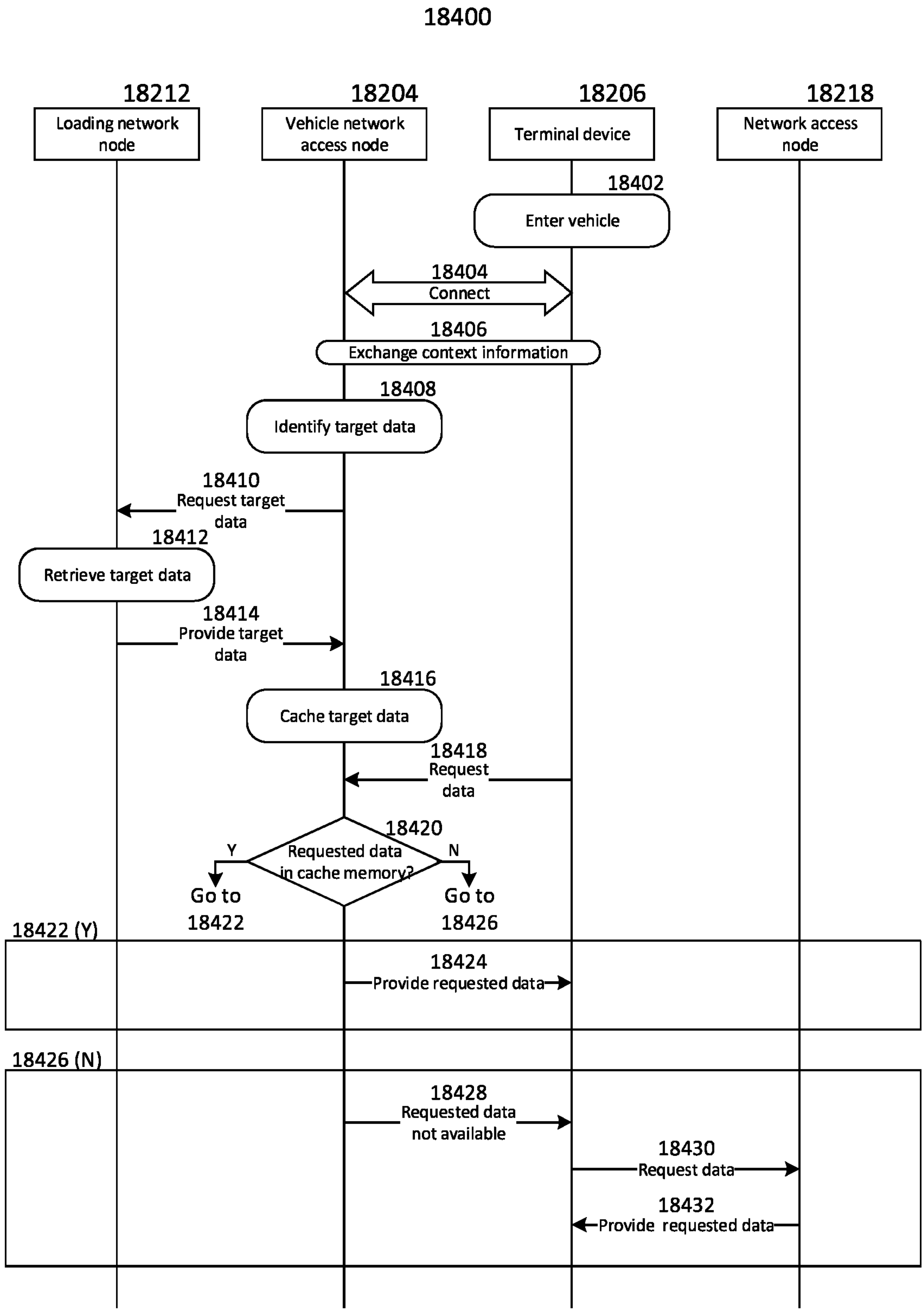
18400
18212
Loading network node
18204
Vehicle network access node
18206
Terminal device
18218
Network access node
18402
Enter vehicle
18404
Connect
18406
Exchange context information
18408
Identify target data
18410
Request target data
18412
Retrieve target data
18414
Provide target data
18416
Cache target data
18418
Request data
18420
Requested data in cache memory?
Y
N
Go to 18422
Go to 18426
18422 (Y)
18424
Provide requested data
18426 (N)
18428
Requested data not available
18430
Request data
18432
Provide requested data

FIG 185

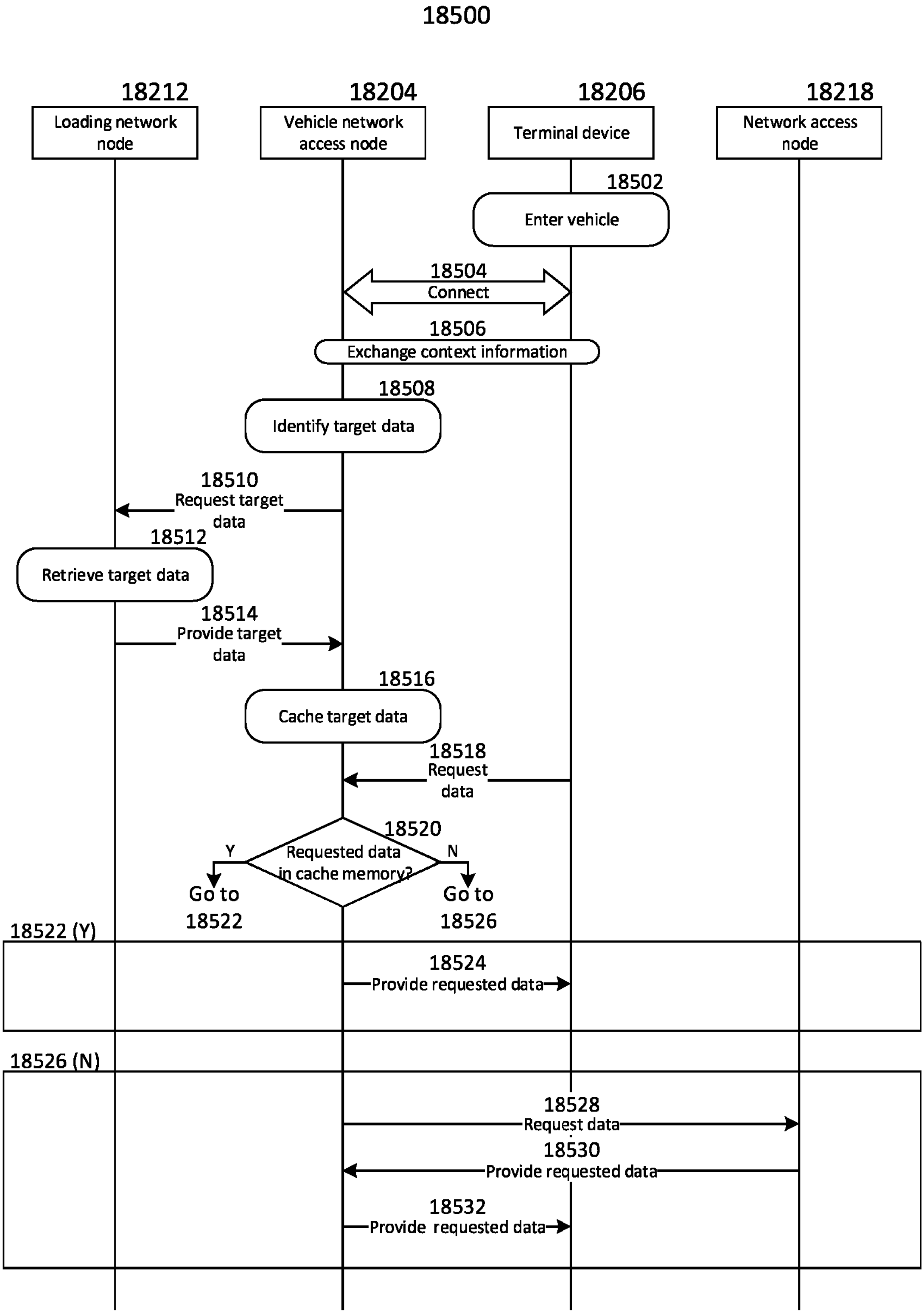
18500
18212
Loading network node
18204
Vehicle network access node
18206
Terminal device
18218
Network access node
18502
Enter vehicle
18504
Connect
18506
Exchange context information
18508
Identify target data
18510
Request target data
18512
Retrieve target data
18514
Provide target data
18516
Cache target data
18518
Request data
18520
Requested data in cache memory?
Y
N
Go to 18522
Go to 18526
18522 (Y)
18524
Provide requested data
18526 (N)
18528
Request data
18530
Provide requested data
18532
Provide requested data

FIG 186

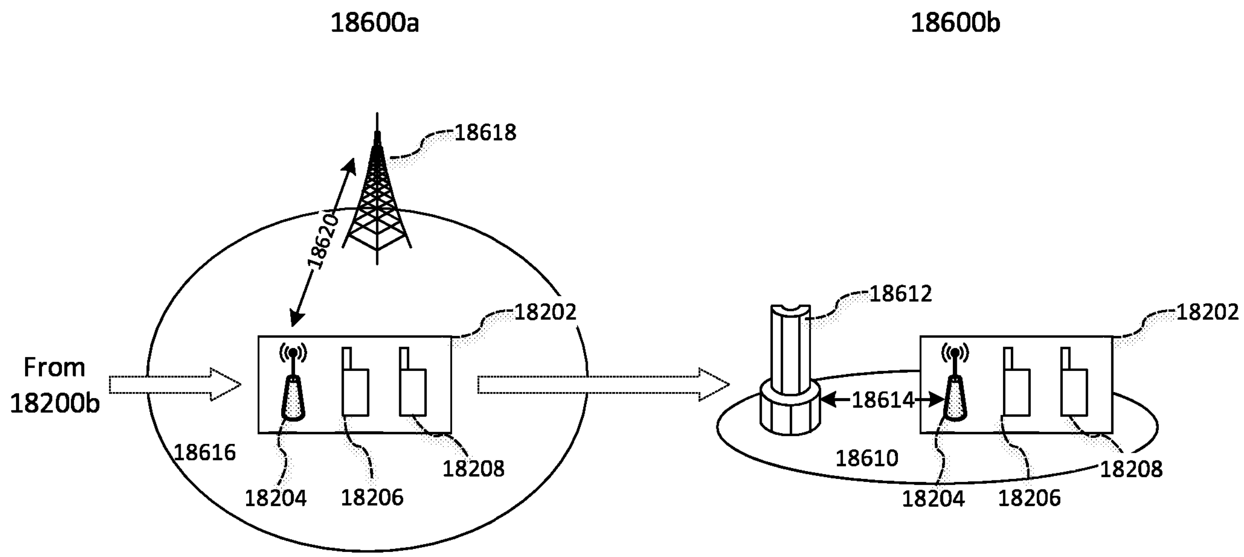
18600a
18600b
18618
18620
18202
From
18200b
18616
18204
18206
18208
18612
18614
18610
18202
18204
18206
18208

FIG 187

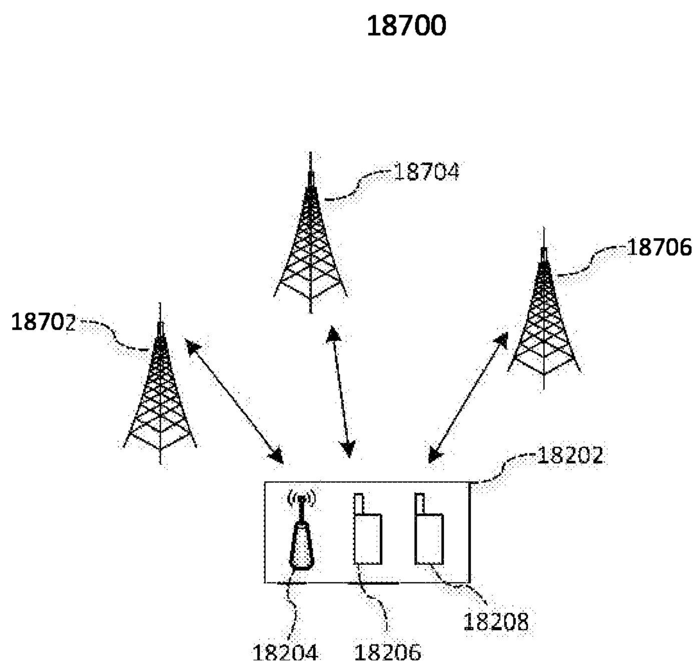

FIG 188

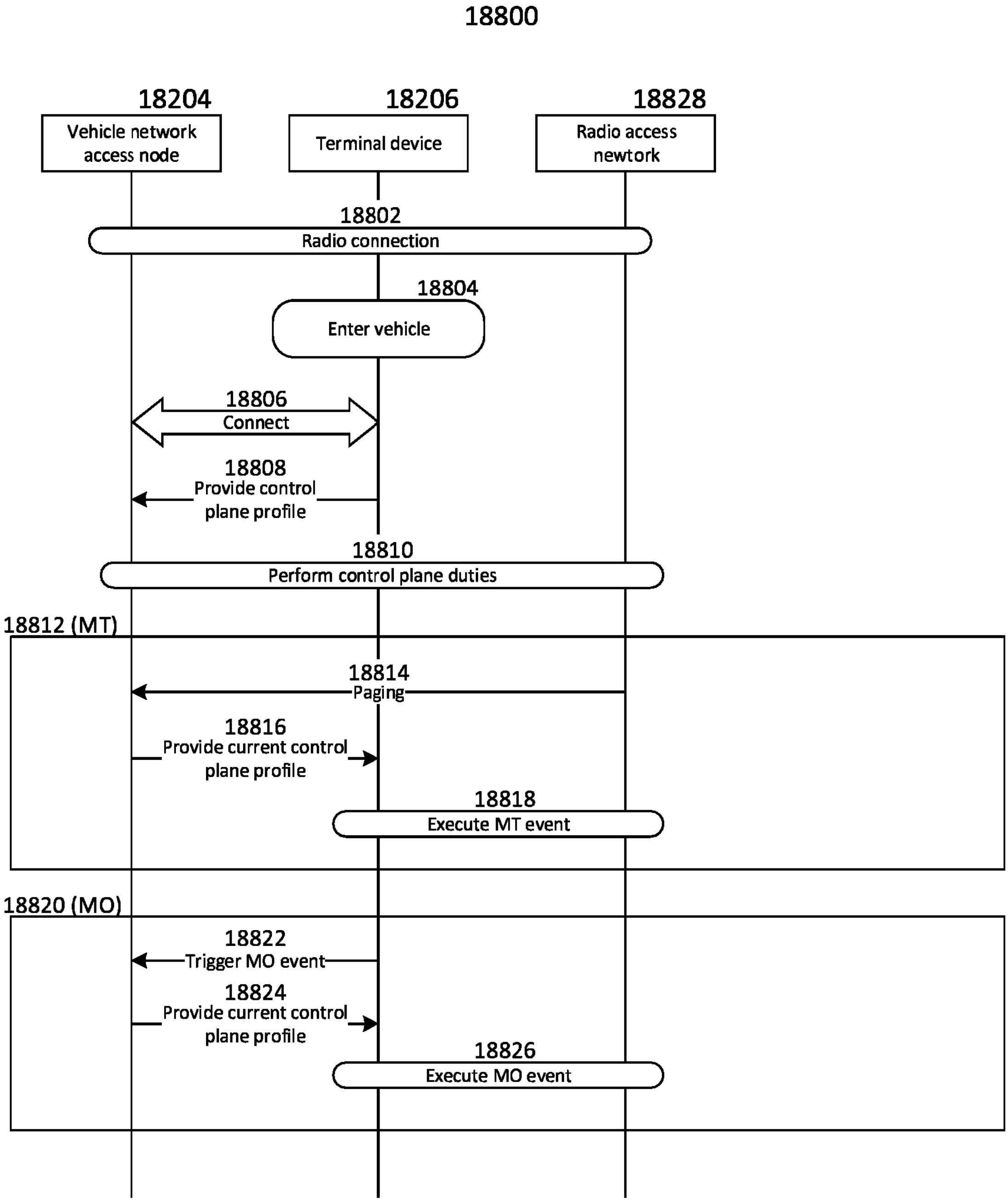
18800
18204
Vehicle network access node
18206
Terminal device
18828
Radio access newtork
18802
Radio connection
18804
Enter vehicle
18806
Connect
18808
Provide control plane profile
18810
Perform control plane duties
18812 (MT)
18814
Paging
18816
Provide current control plane profile
18818
Execute MT event
18820 (MO)
18822
Trigger MO event
18824
Provide current control plane profile
18826
Execute MO event

FIG 189

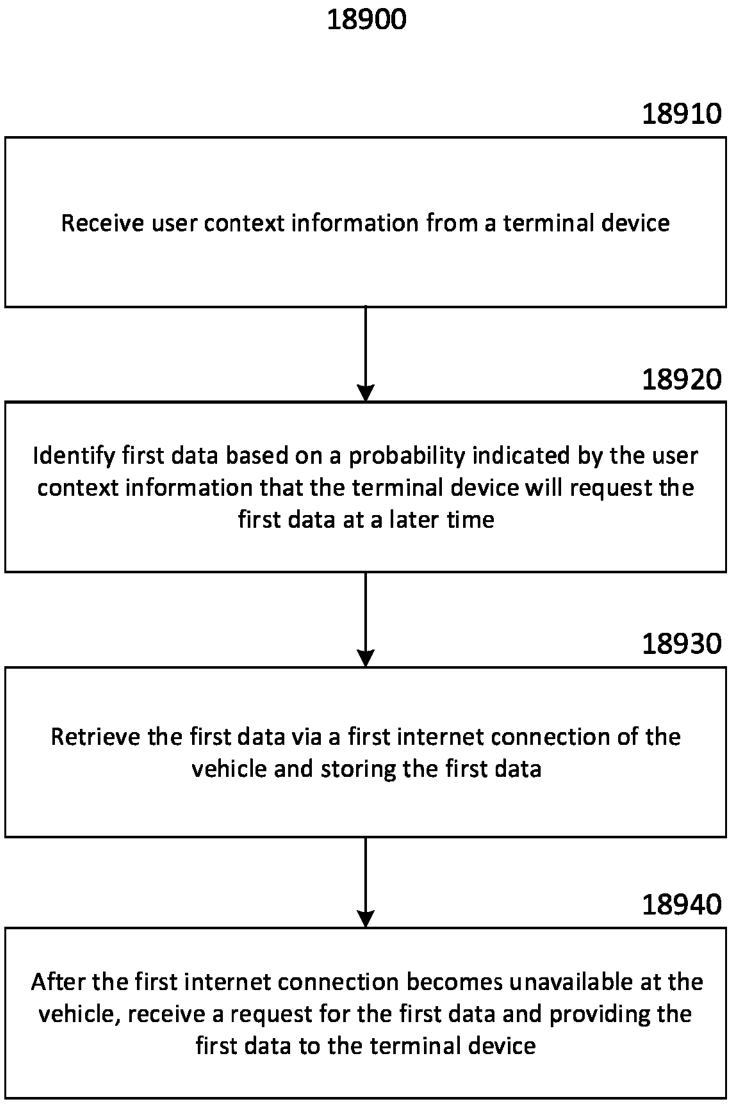
18900
18910
Receive user context information from a terminal device
18920
Identify first data based on a probability indicated by the user context information that the terminal device will request the first data at a later time
18930
Retrieve the first data via a first internet connection of the vehicle and storing the first data
18940
After the first internet connection becomes unavailable at the vehicle, receive a request for the first data and providing the first data to the terminal device

FIG 190

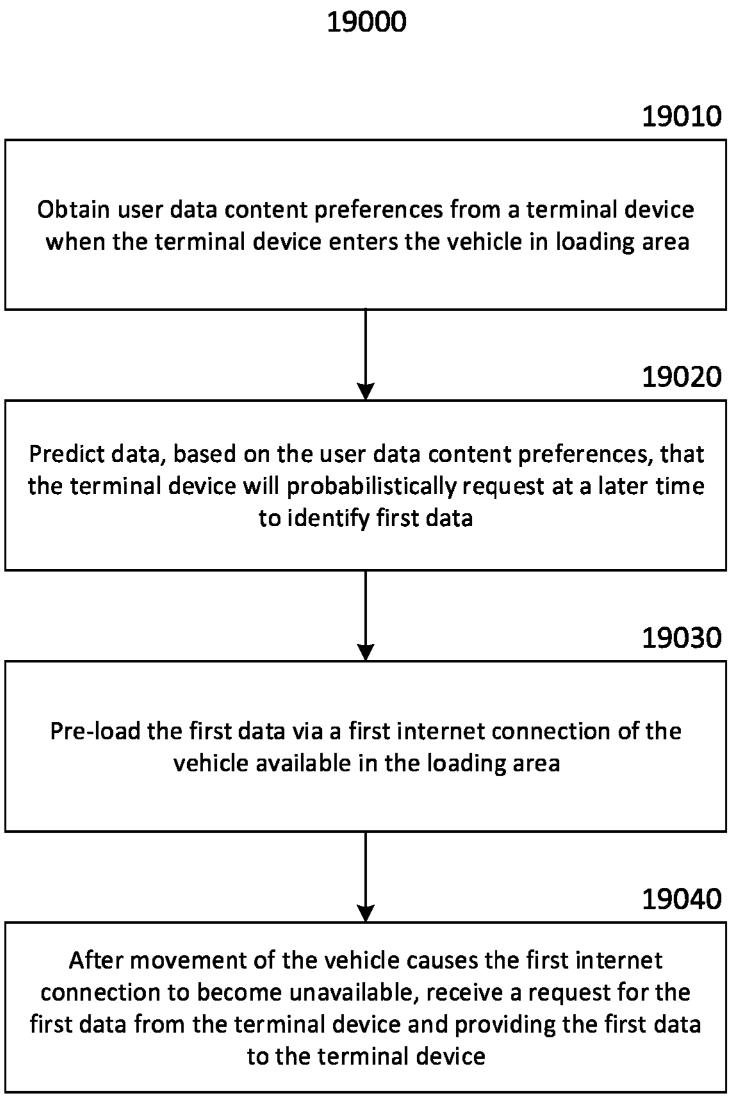
19000
19010
Obtain user data content preferences from a terminal device when the terminal device enters the vehicle in loading area
19020
Predict data, based on the user data content preferences, that the terminal device will probabilistically request at a later time to identify first data
19030
Pre-load the first data via a first internet connection of the vehicle available in the loading area
19040
After movement of the vehicle causes the first internet connection to become unavailable, receive a request for the first data from the terminal device and providing the first data to the terminal device

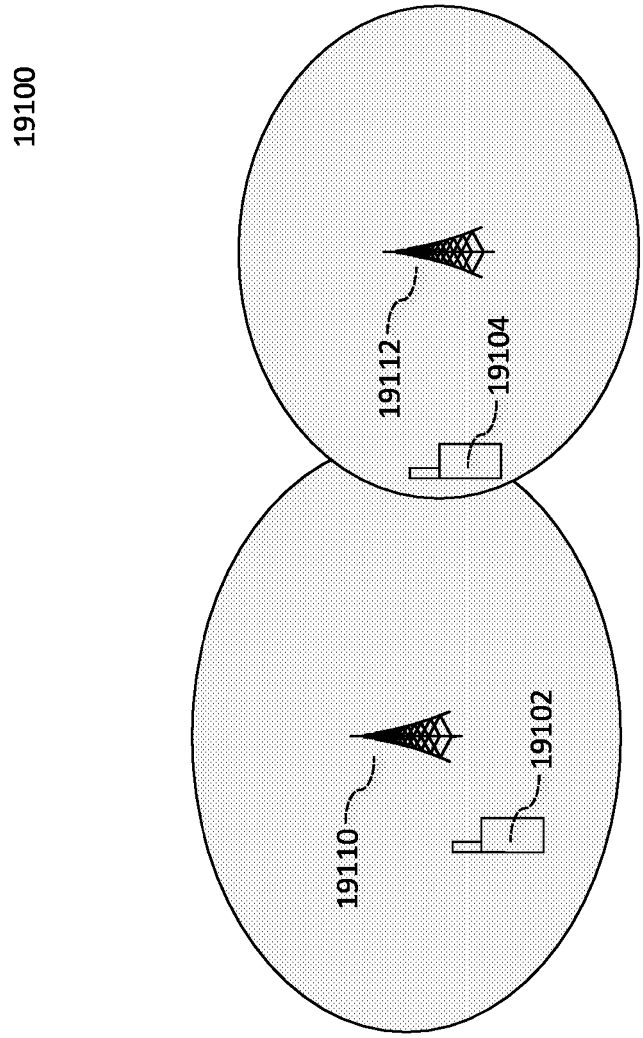


FIG 191

FIG 192

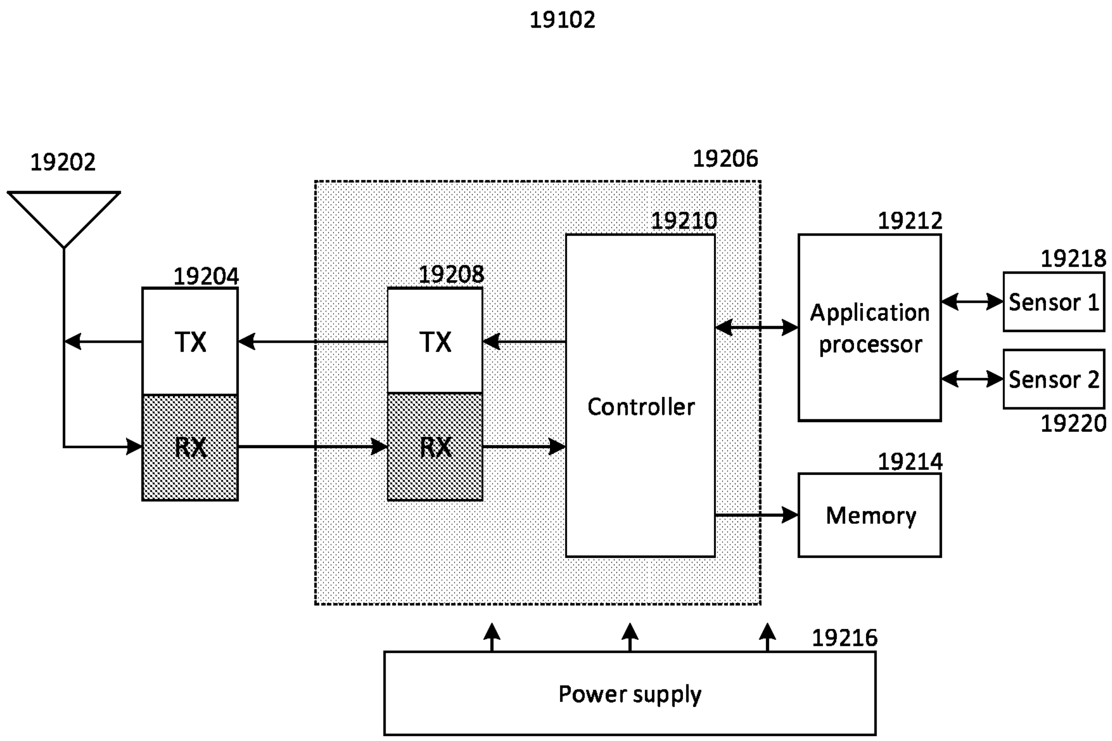
19102
19202
19206
19210
19212
19218
19204
19208
TX
TX
Application processor
Sensor 1
Sensor 2
Controller
RX
RX
19220
19214
Memory
19216
Power supply

FIG 193

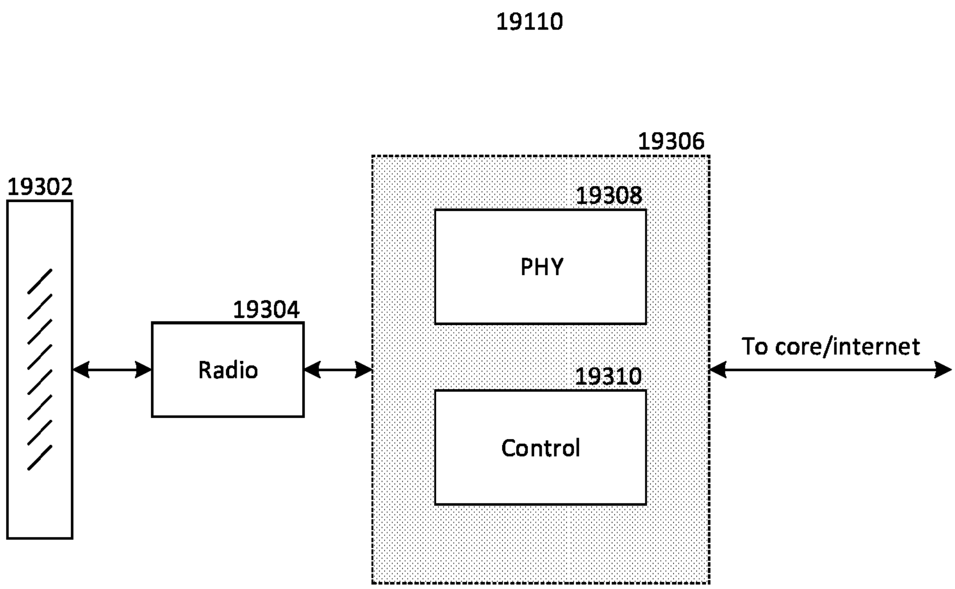
19110
19306
19302
19308
PHY
19304
Radio
To core/internet
19310
Control

FIG 194

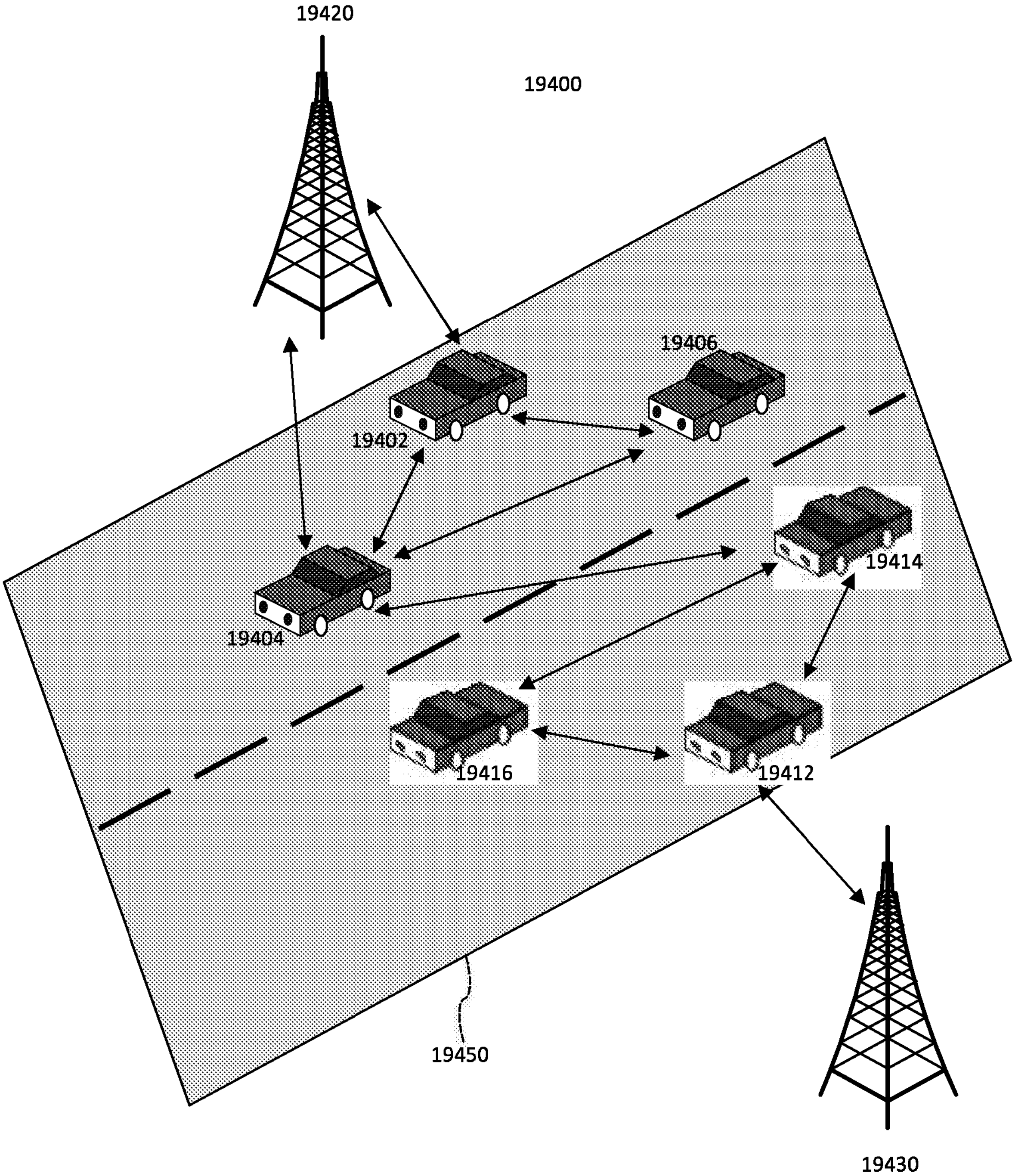
19420
19400
19406
19402
19404
19414
19416
19412
19450
19430

FIG 195

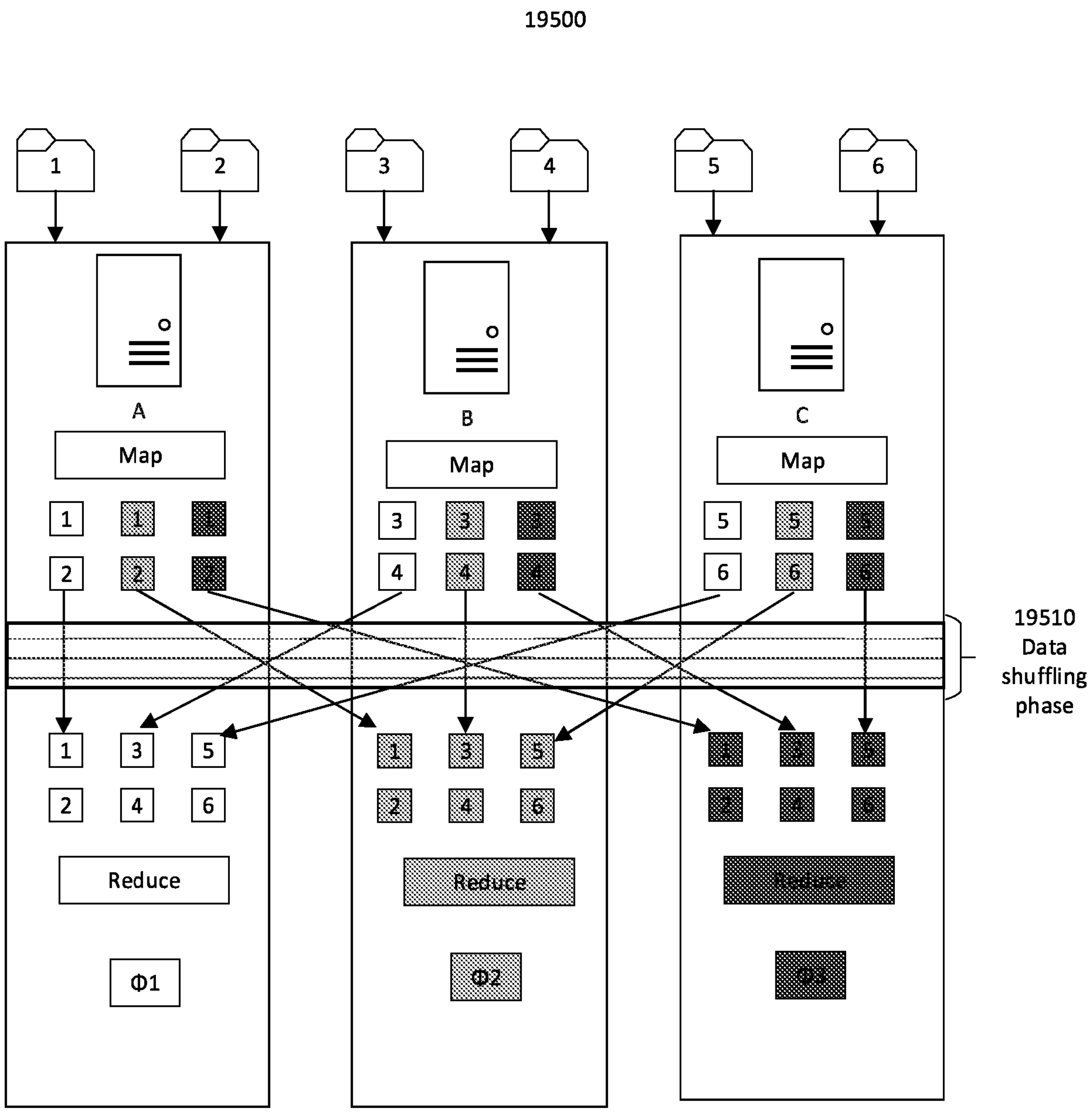
19500
1
2
3
4
5
6
A
B
C
Map
Map
Map
Reduce
Reduce
Reduce
Φ1
Φ2
Φ3
19510
Data
shuffling
phase

FIG 196

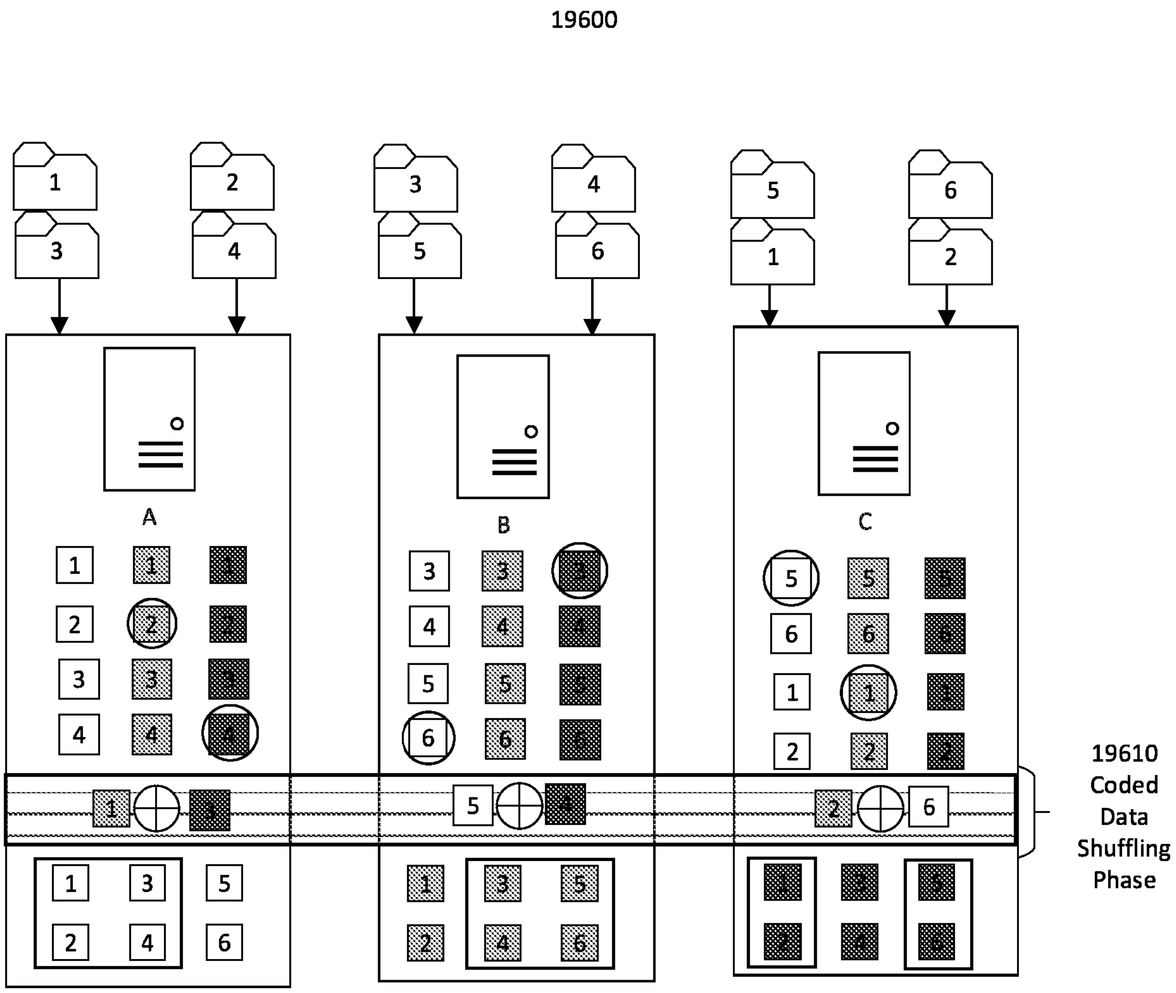

FIG 197

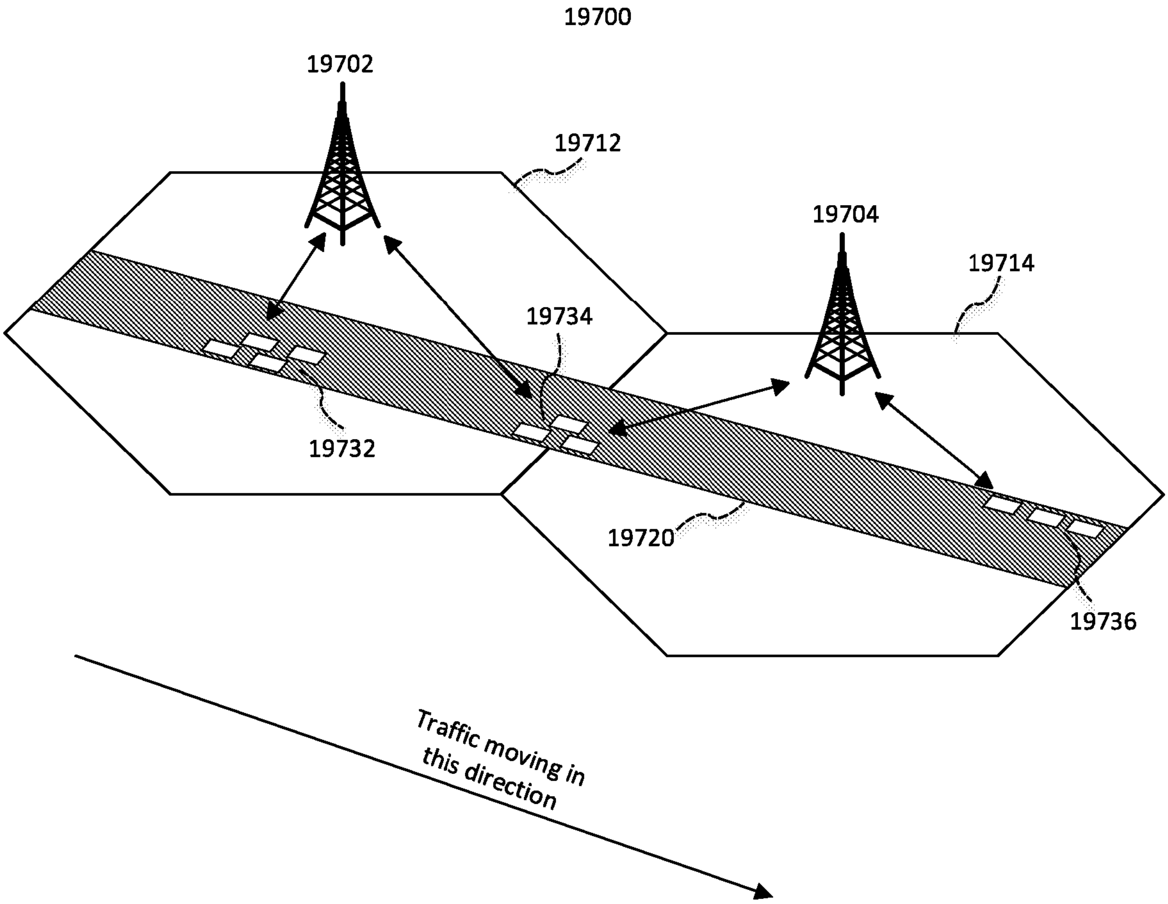
19700
19702
19712
19704
19714
19734
19732
19720
19736
Traffic moving in this direction

FIG 198

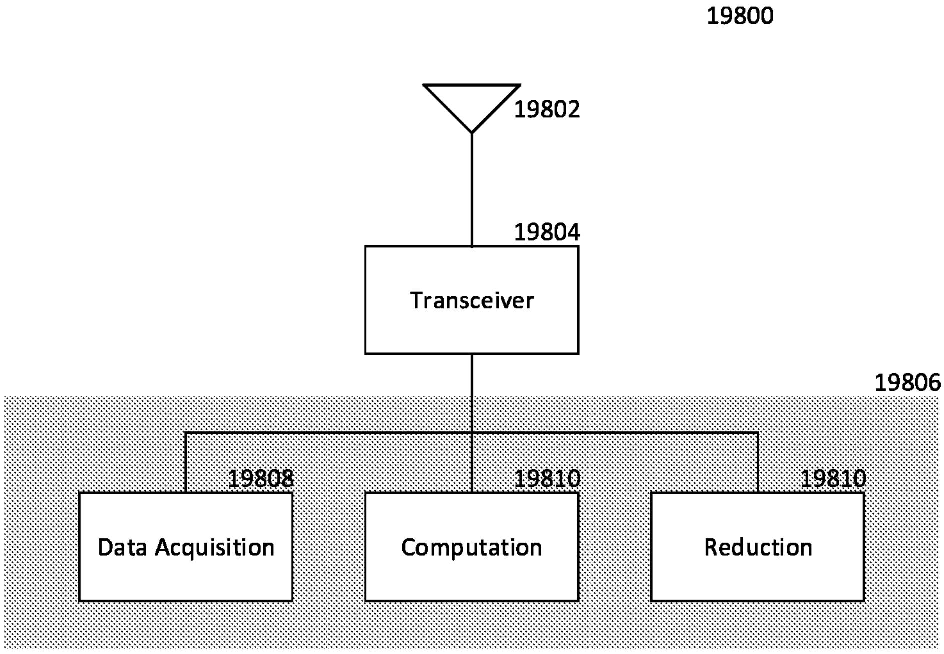
19800
19802
19804
Transceiver
19806
19808
Data Acquisition
19810
Computation
19810
Reduction

FIG 199

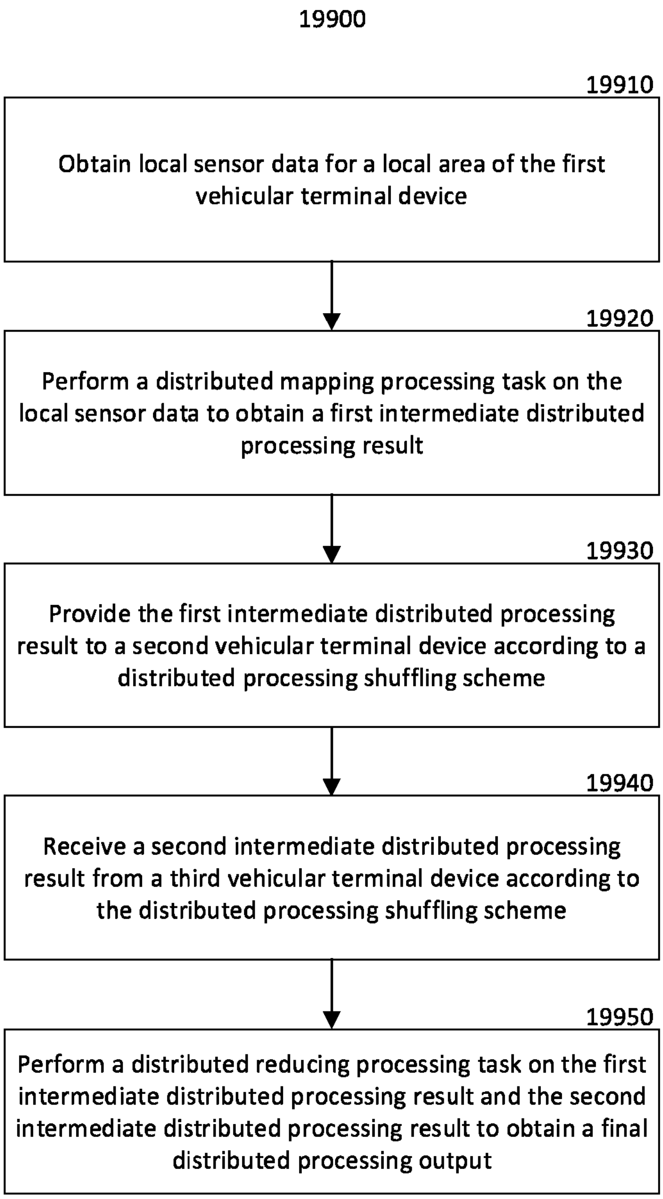
19900
19910
Obtain local sensor data for a local area of the first vehicular terminal device
19920
Perform a distributed mapping processing task on the local sensor data to obtain a first intermediate distributed processing result
19930
Provide the first intermediate distributed processing result to a second vehicular terminal device according to a distributed processing shuffling scheme
19940
Receive a second intermediate distributed processing result from a third vehicular terminal device according to the distributed processing shuffling scheme
19950
Perform a distributed reducing processing task on the first intermediate distributed processing result and the second intermediate distributed processing result to obtain a final distributed processing output

FIG 200

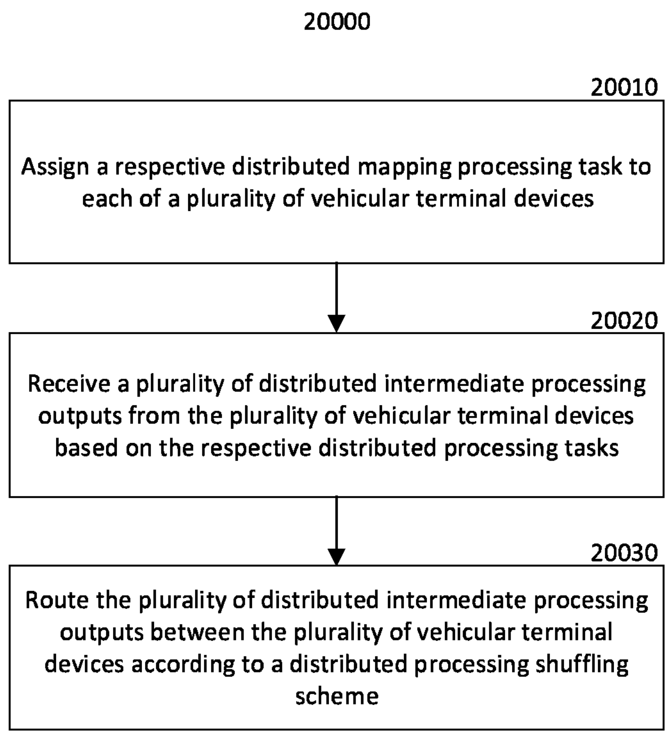
20000
20010
Assign a respective distributed mapping processing task to each of a plurality of vehicular terminal devices
20020
Receive a plurality of distributed intermediate processing outputs from the plurality of vehicular terminal devices based on the respective distributed processing tasks
20030
Route the plurality of distributed intermediate processing outputs between the plurality of vehicular terminal devices according to a distributed processing shuffling scheme

FIG 201

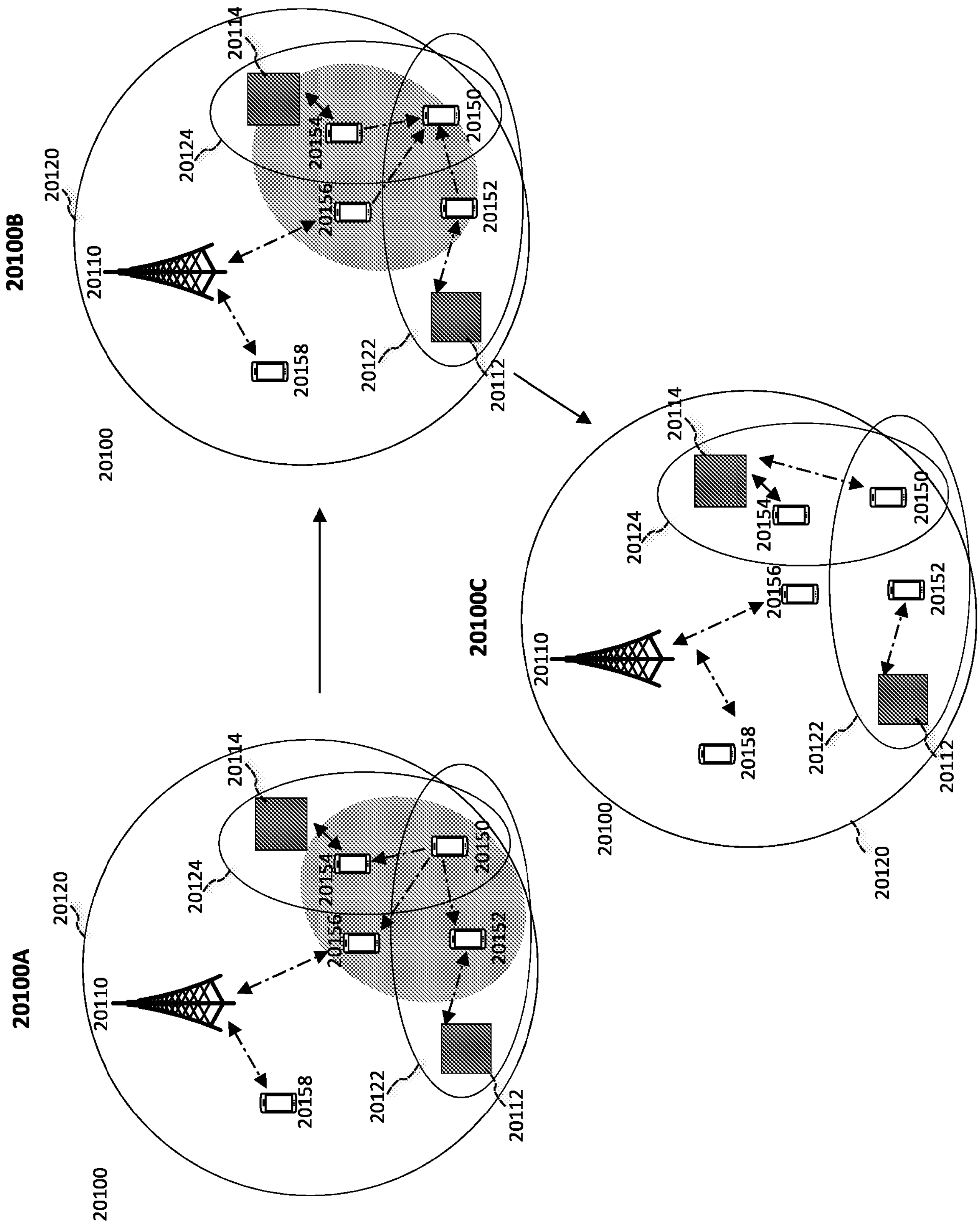

20100A
20100B
20100C
20100
20110
20112
20114
20120
20122
20124
20150
20152
20154
20156
20158

FIG 202

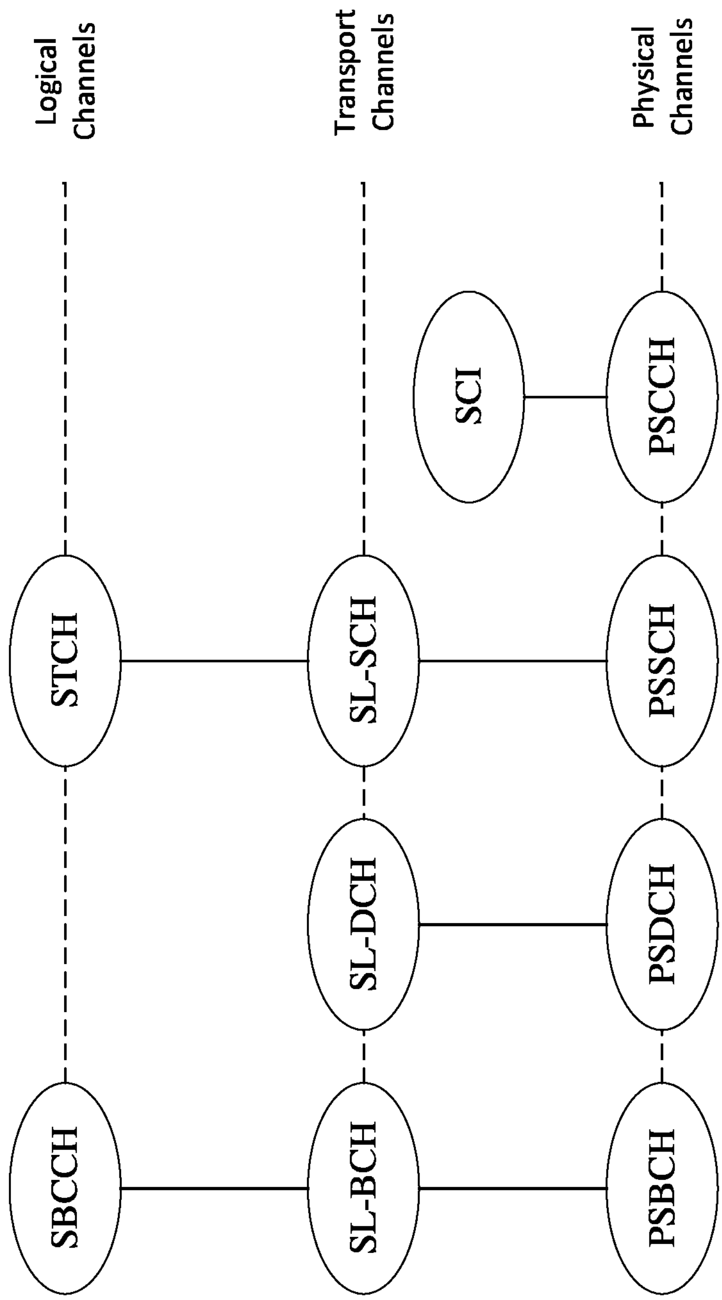
Logical Channels
Transport Channels
Physical Channels
STCH
SBCCH
SL-SCH
SL-DCH
SL-BCH
SCI
PSCCH
PSSCH
PSDCH
PSBCH

FIG 203

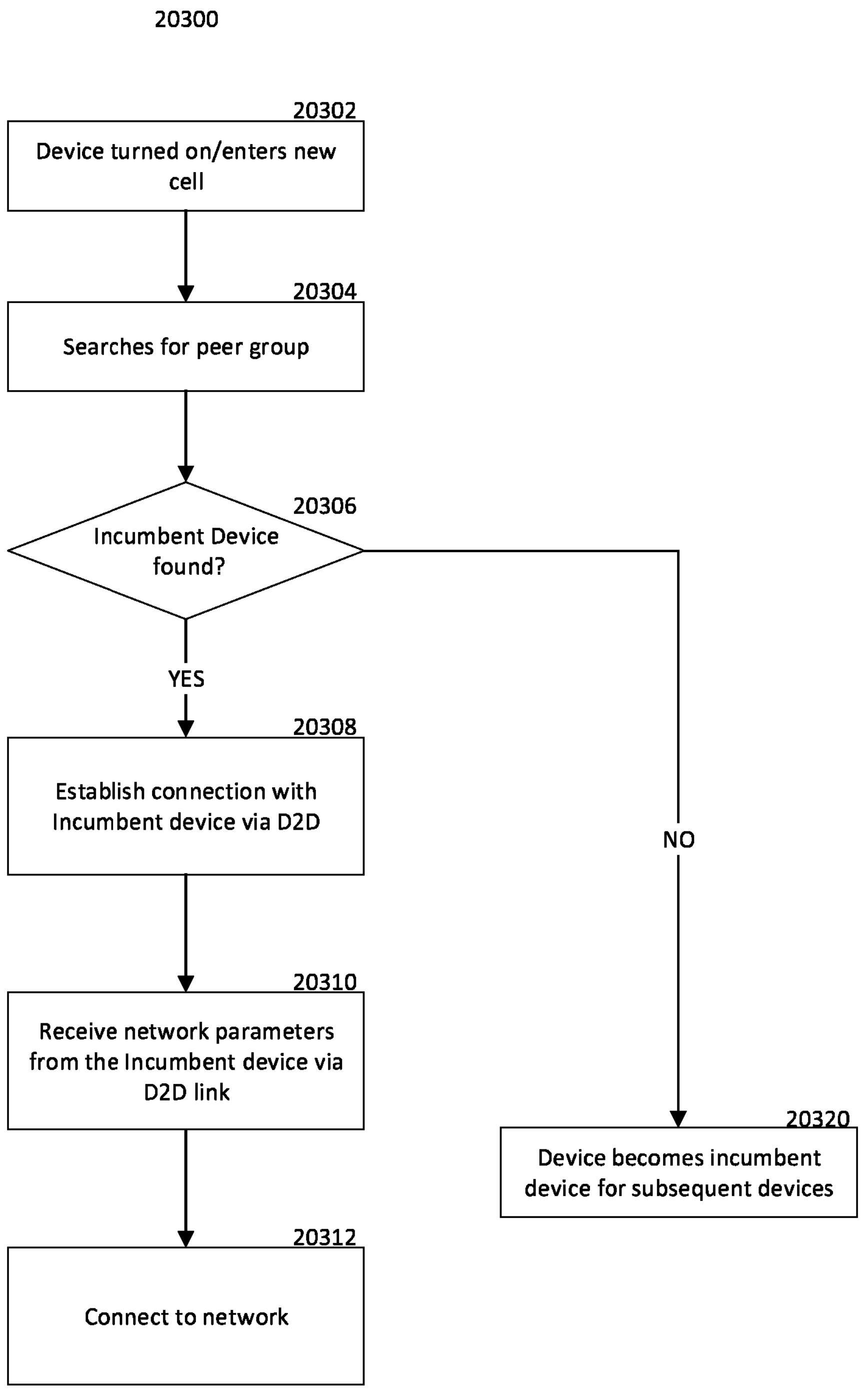
20300
20302
Device turned on/enters new cell
20304
Searches for peer group
20306
Incumbent Device found?
YES
NO
20308
Establish connection with Incumbent device via D2D
20310
Receive network parameters from the Incumbent device via D2D link
20312
Connect to network
20320
Device becomes incumbent device for subsequent devices

FIG 204

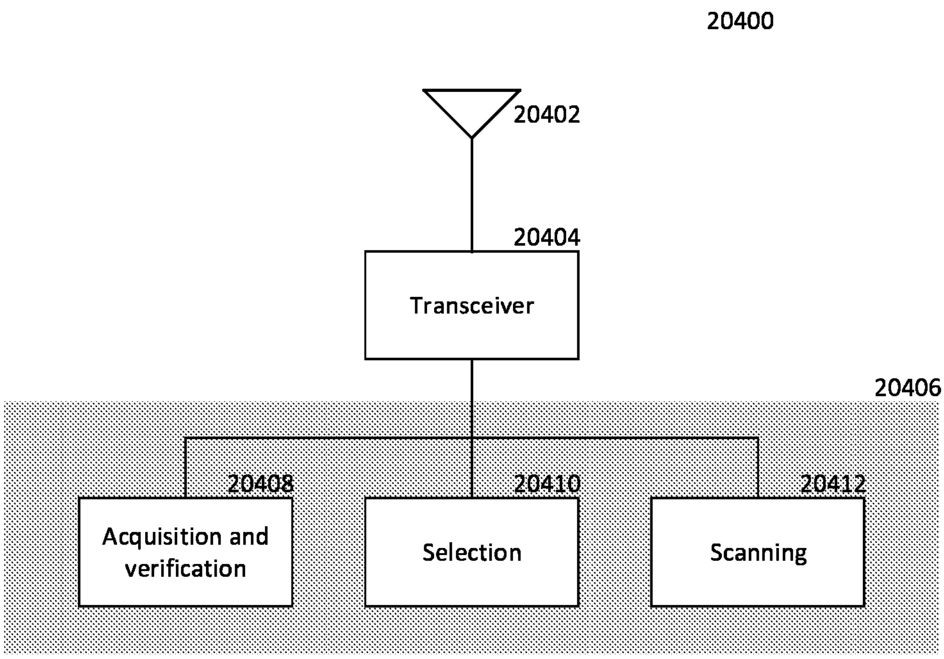
20400
20402
20404
Transceiver
20406
20408
Acquisition and verification
20410
Selection
20412
Scanning

FIG 205

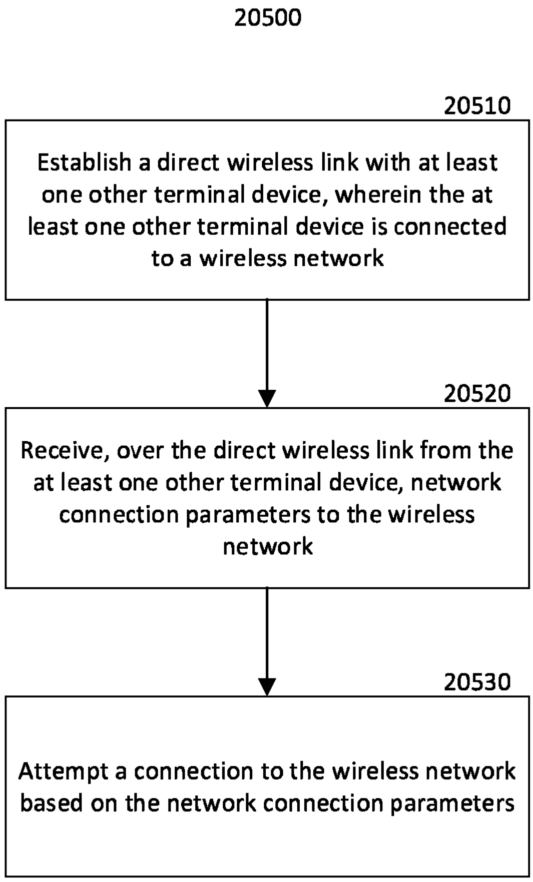
20500
20510
Establish a direct wireless link with at least one other terminal device, wherein the at least one other terminal device is connected to a wireless network
20520
Receive, over the direct wireless link from the at least one other terminal device, network connection parameters to the wireless network
20530
Attempt a connection to the wireless network based on the network connection parameters

FIG 206

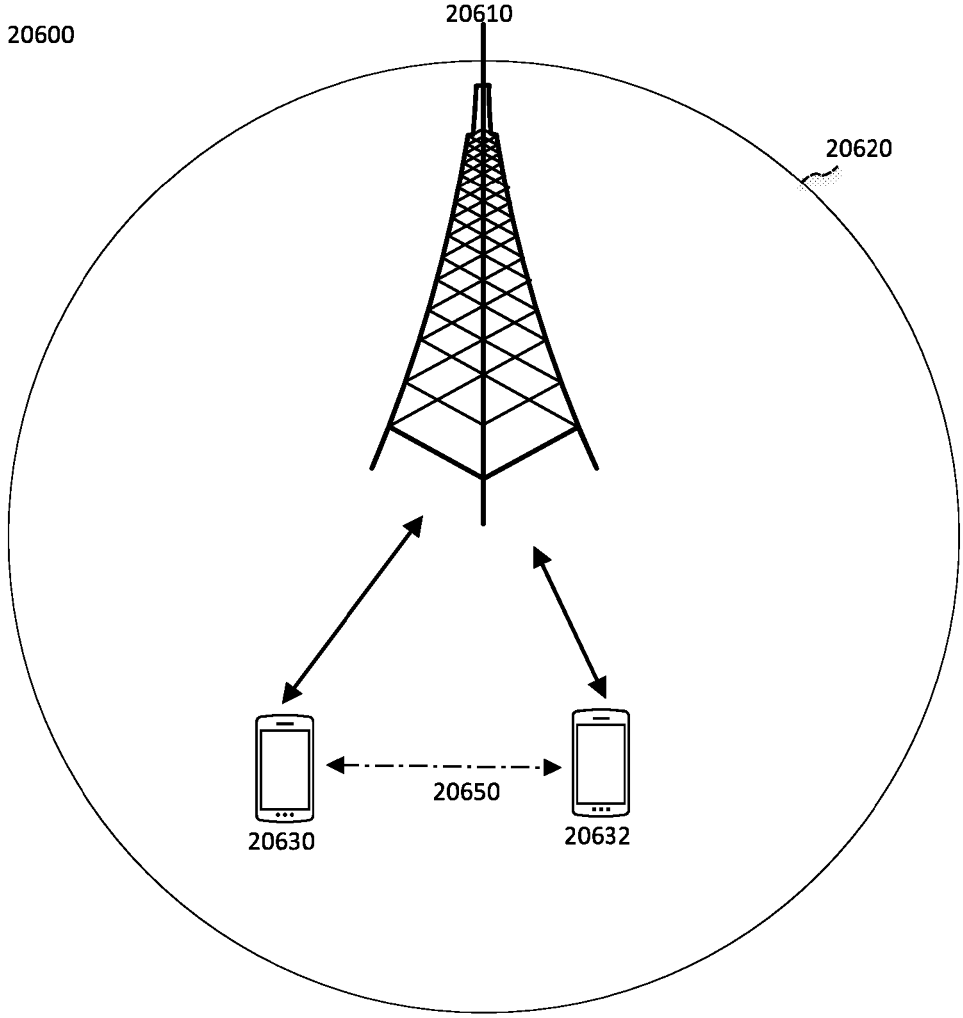

FIG 207

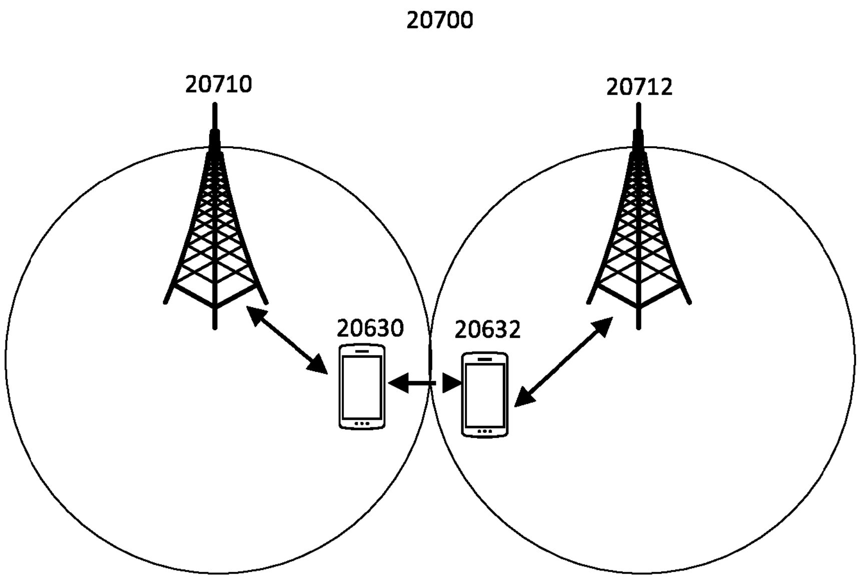

# FIG 208

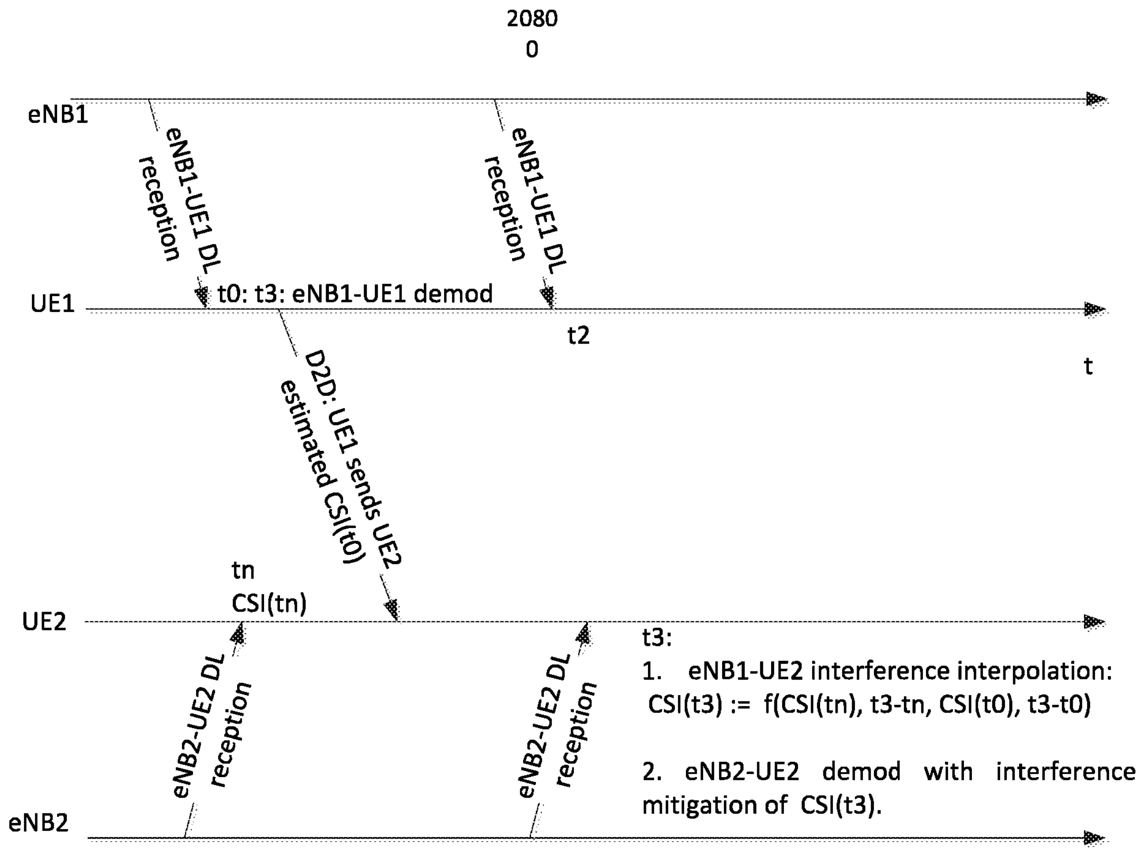
2080
0
eNB1
eNB1-UE1 DL
reception
eNB1-UE1 DL
reception
UE1
t0: t3: eNB1-UE1 demod
t2
t
D2D: UE1 sends UE2
estimated CSI(t0)
tn
CSI(tn)
UE2
t3:
1. eNB1-UE2 interference interpolation:
CSI(t3) := f(CSI(tn), t3-tn, CSI(t0), t3-t0)
2. eNB2-UE2 demod with interference mitigation of CSI(t3).
eNB2-UE2 DL
reception
eNB2-UE2 DL
reception
eNB2

FIG 209

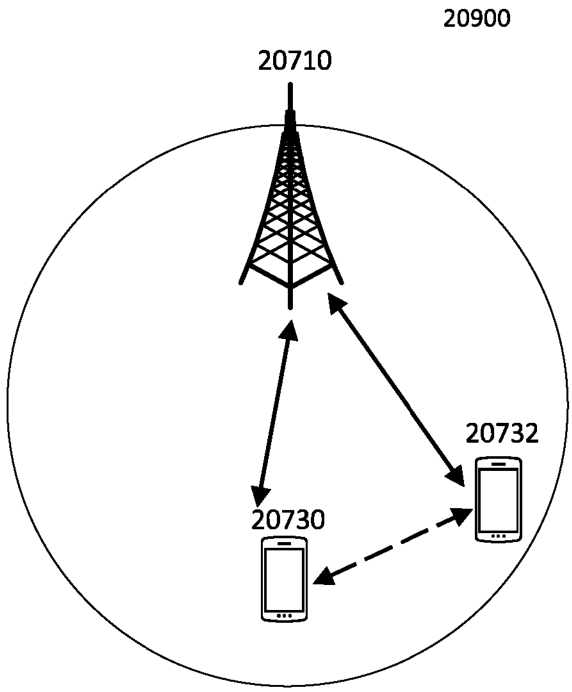

FIG 210

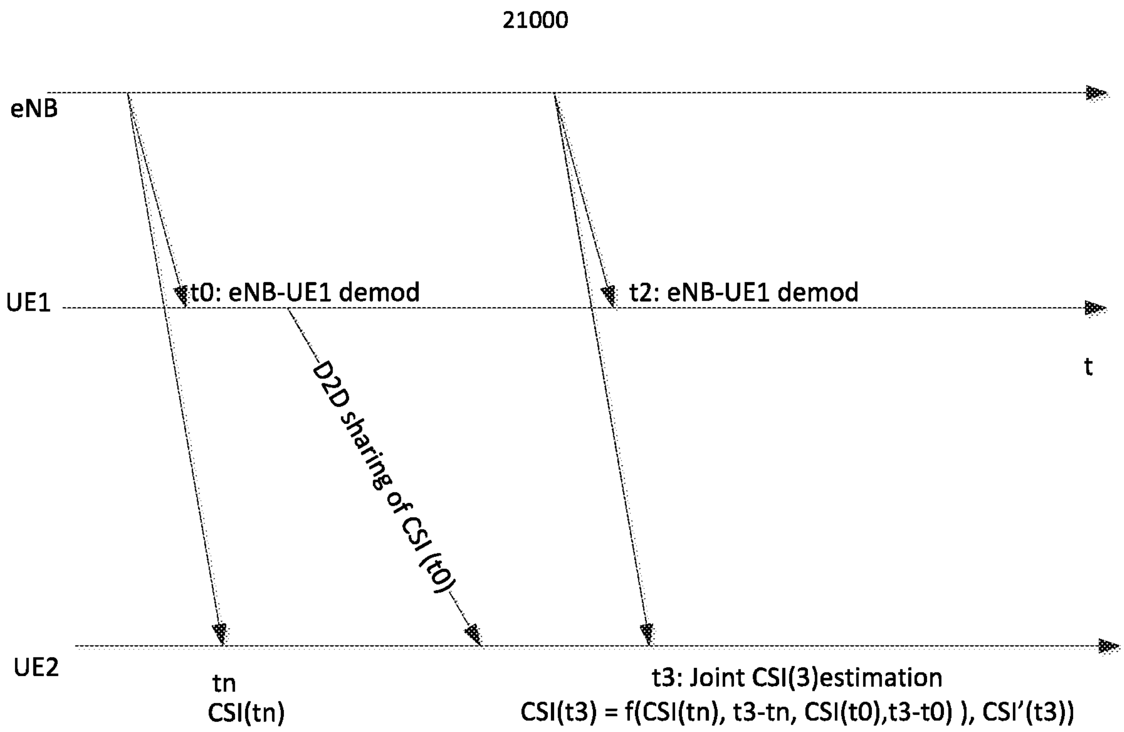
21000
eNB
UE1
UE2
t0: eNB-UE1 demod
t2: eNB-UE1 demod
t
D2D sharing of CSI (t0)
tn
CSI(tn)
t3: Joint CSI(3)estimation
CSI(t3) = f(CSI(tn), t3-tn, CSI(t0),t3-t0) ), CSI'(t3))

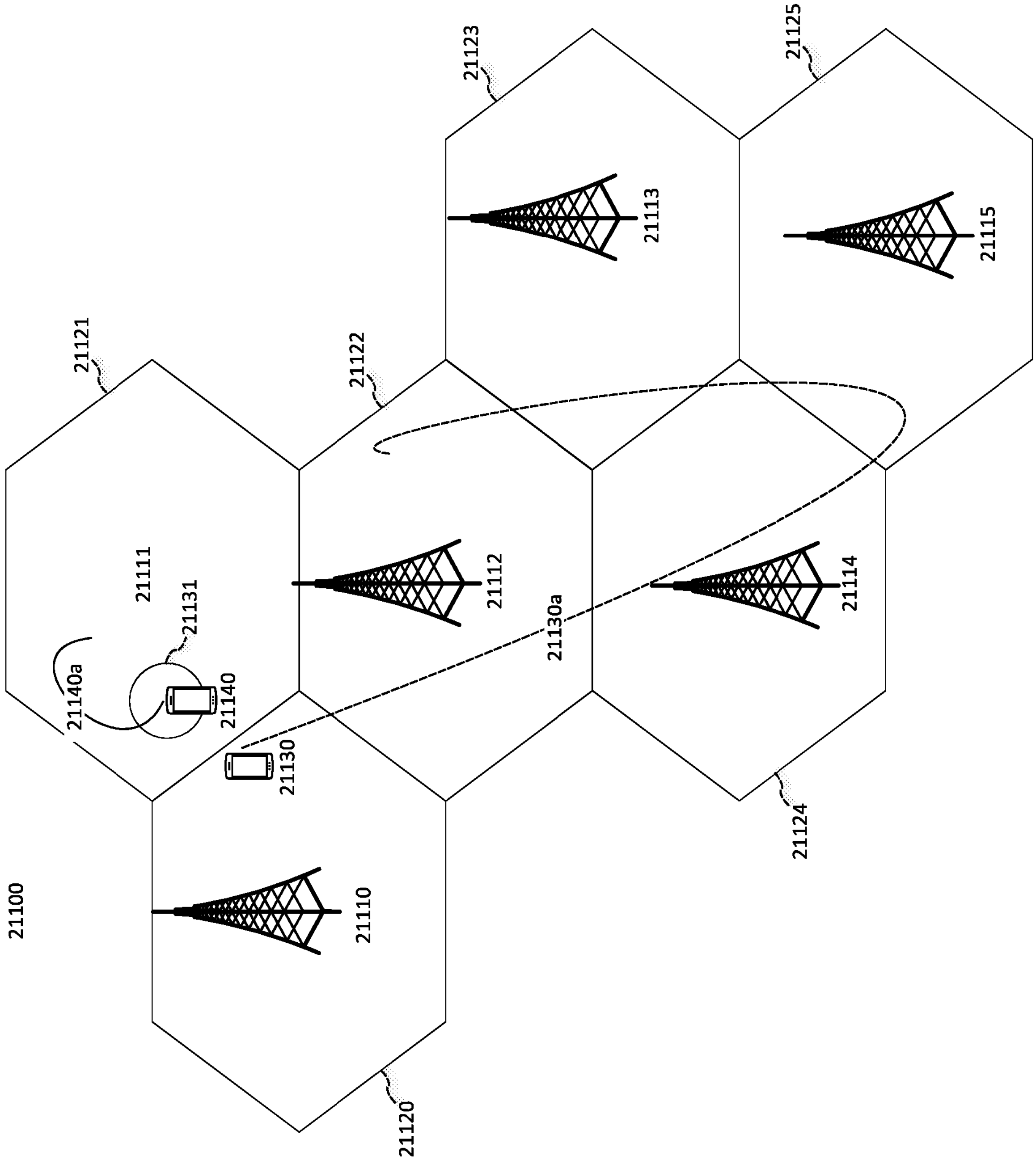
21100
21110
21111
21112
21113
21114
21115
21120
21121
21122
21123
21124
21125
21130
21130a
21131
21140
21140a

FIG 211

FIG 212

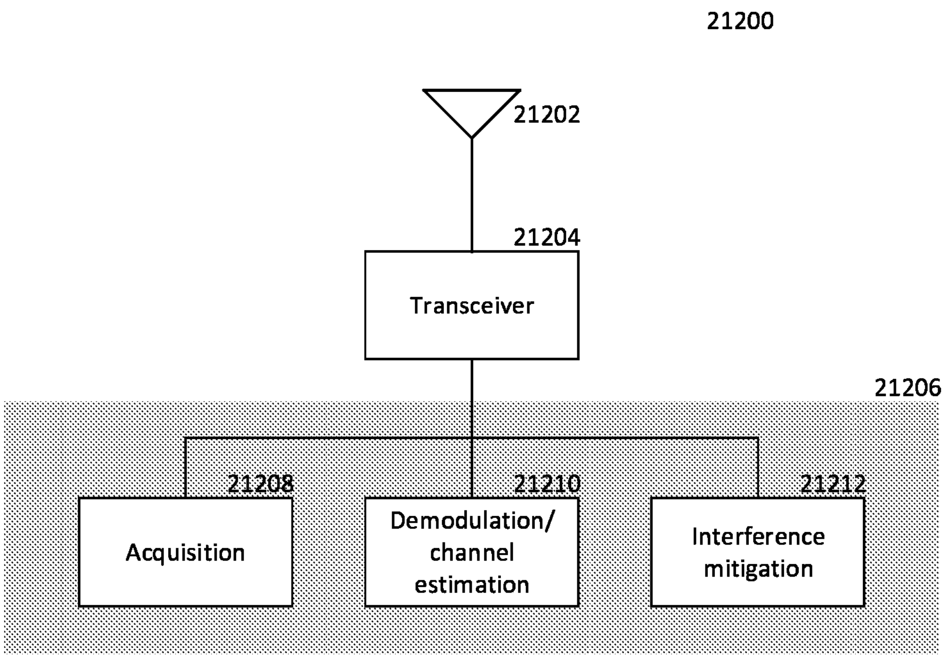
21200
21202
21204
Transceiver
21206
21208
Acquisition
21210
Demodulation/
channel
estimation
21212
Interference
mitigation

FIG 213

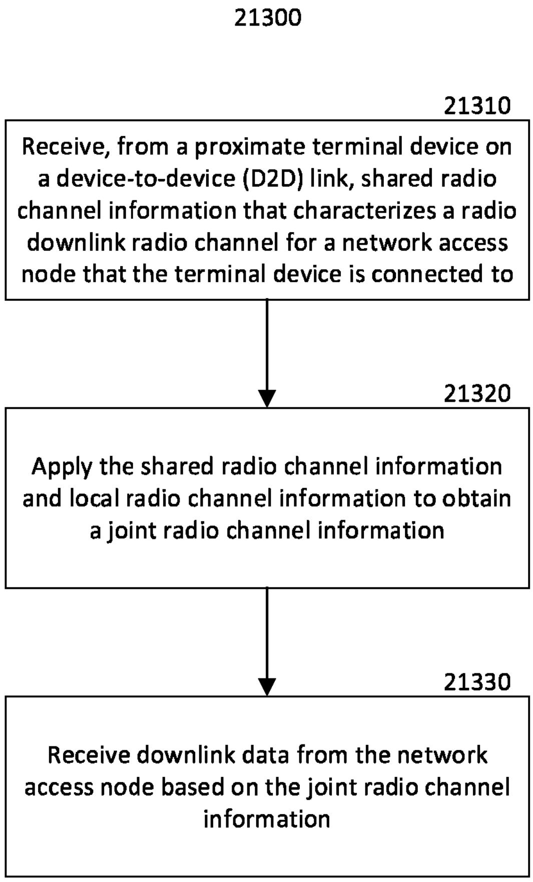
21300
21310
Receive, from a proximate terminal device on a device-to-device (D2D) link, shared radio channel information that characterizes a radio downlink radio channel for a network access node that the terminal device is connected to
21320
Apply the shared radio channel information and local radio channel information to obtain a joint radio channel information
21330
Receive downlink data from the network access node based on the joint radio channel information

FIG 214

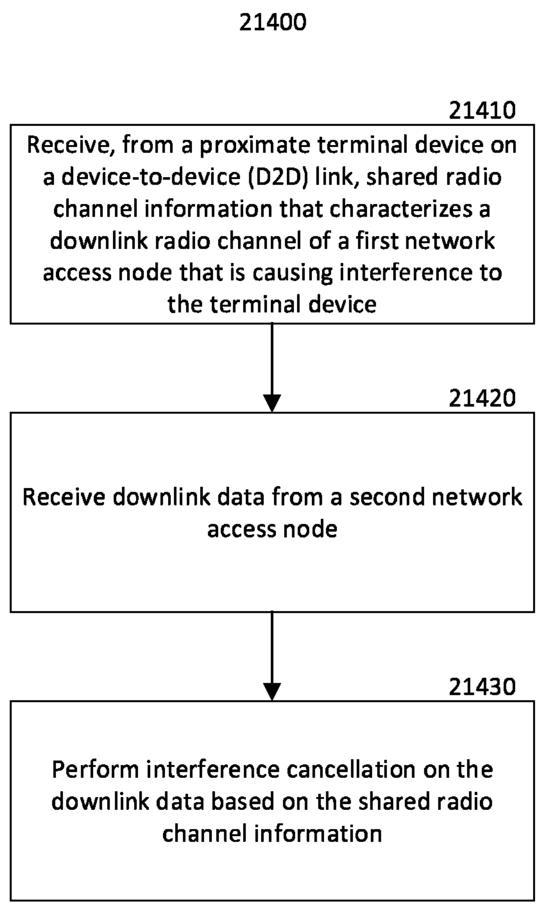
21400
21410
Receive, from a proximate terminal device on a device-to-device (D2D) link, shared radio channel information that characterizes a downlink radio channel of a first network access node that is causing interference to the terminal device
21420
Receive downlink data from a second network access node
21430
Perform interference cancellation on the downlink data based on the shared radio channel information

FIG 215

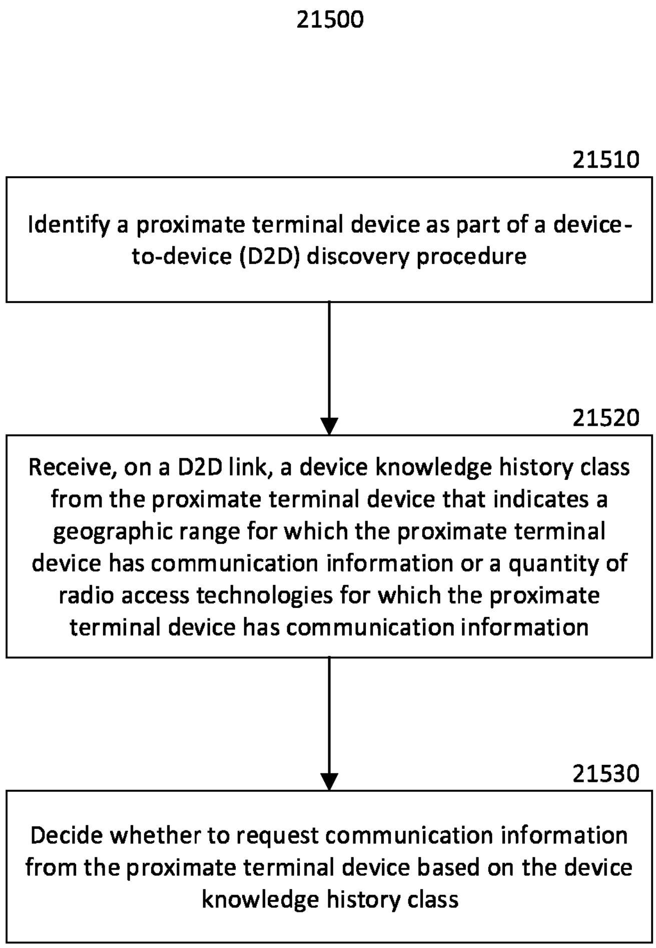
21500
21510
Identify a proximate terminal device as part of a device-to-device (D2D) discovery procedure
21520
Receive, on a D2D link, a device knowledge history class from the proximate terminal device that indicates a geographic range for which the proximate terminal device has communication information or a quantity of radio access technologies for which the proximate terminal device has communication information
21530
Decide whether to request communication information from the proximate terminal device based on the device knowledge history class

FIG 216

21600

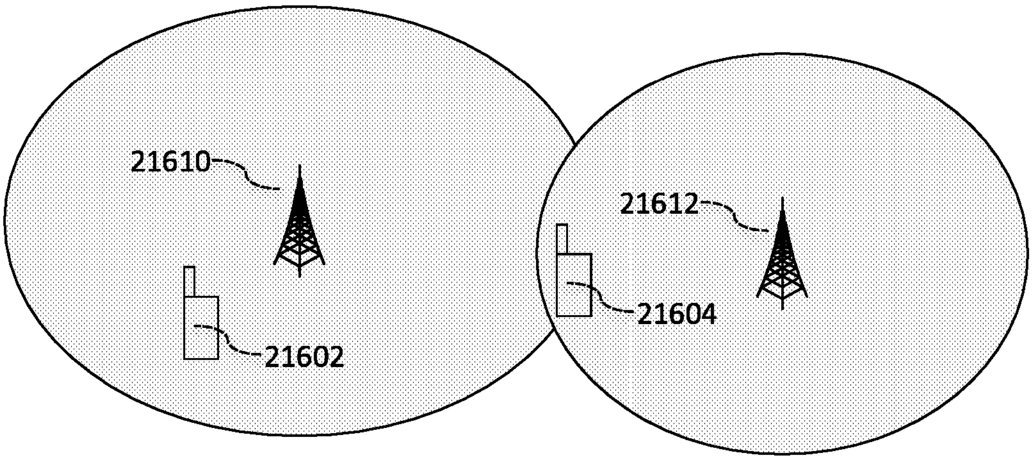

# FIG 217

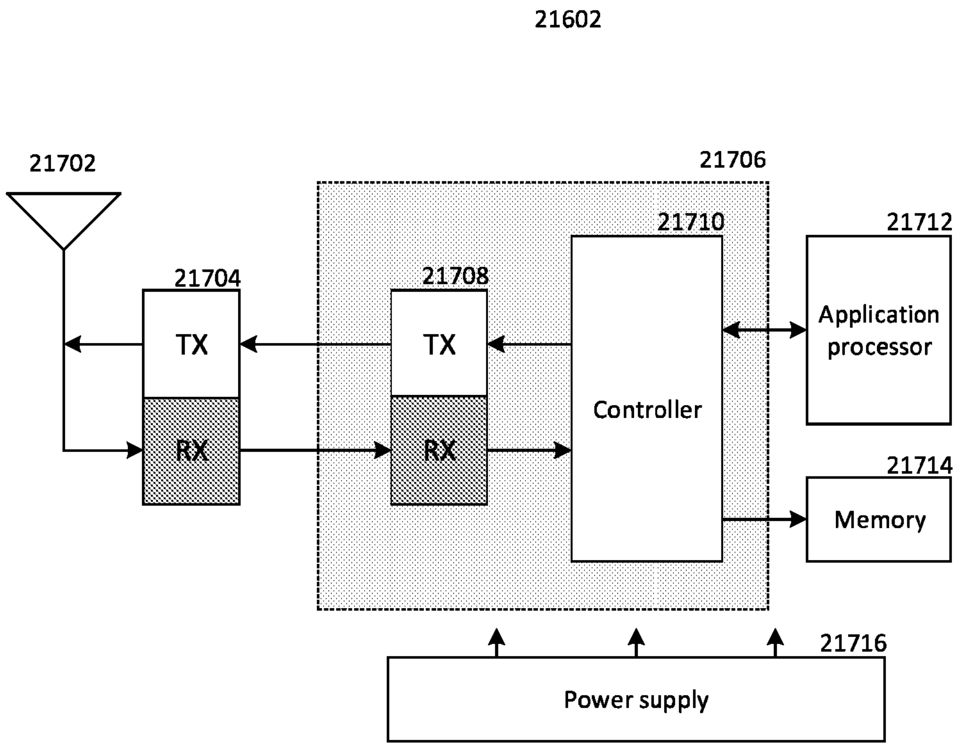
21602
21702
21706
21710
21712
21704
21708
TX
TX
Application processor
Controller
RX
RX
21714
Memory
21716
Power supply

FIG 218

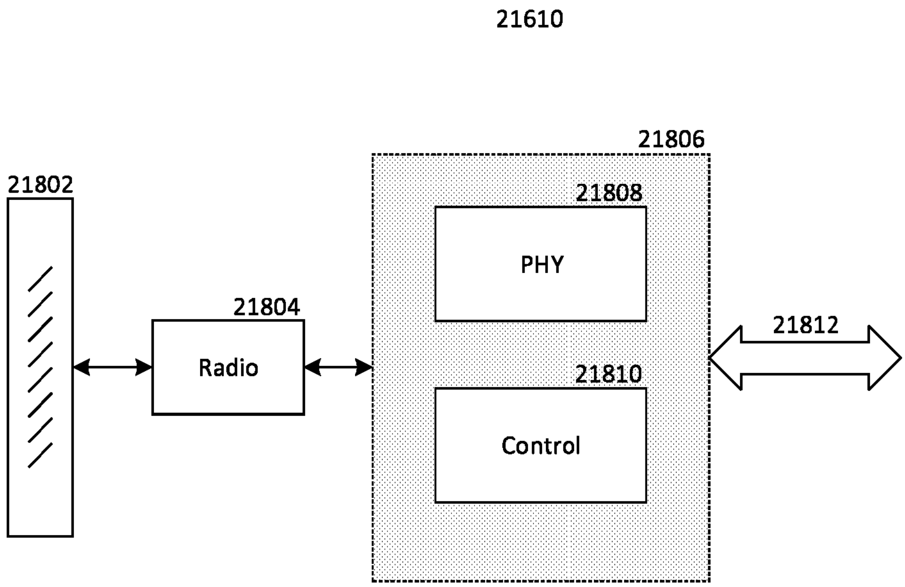
21610
21806
21802
21808
PHY
21804
Radio
21812
21810
Control

FIG 219

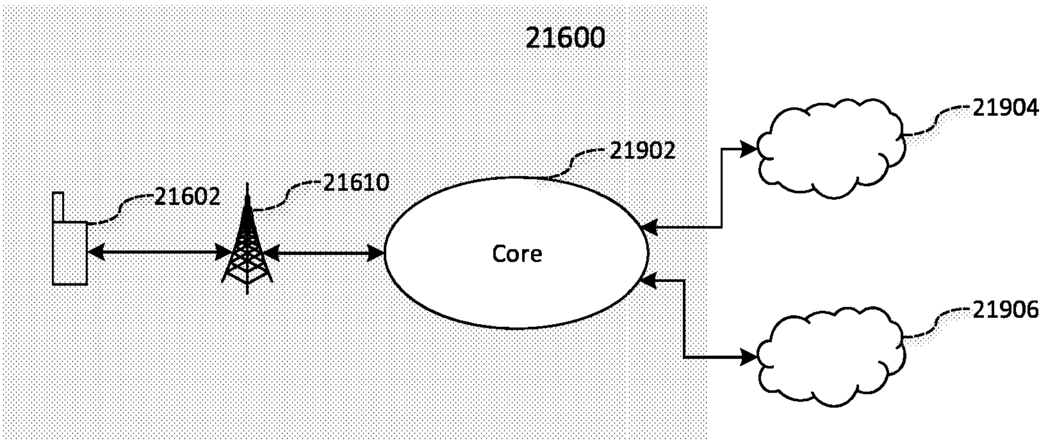

FIG 220

22000

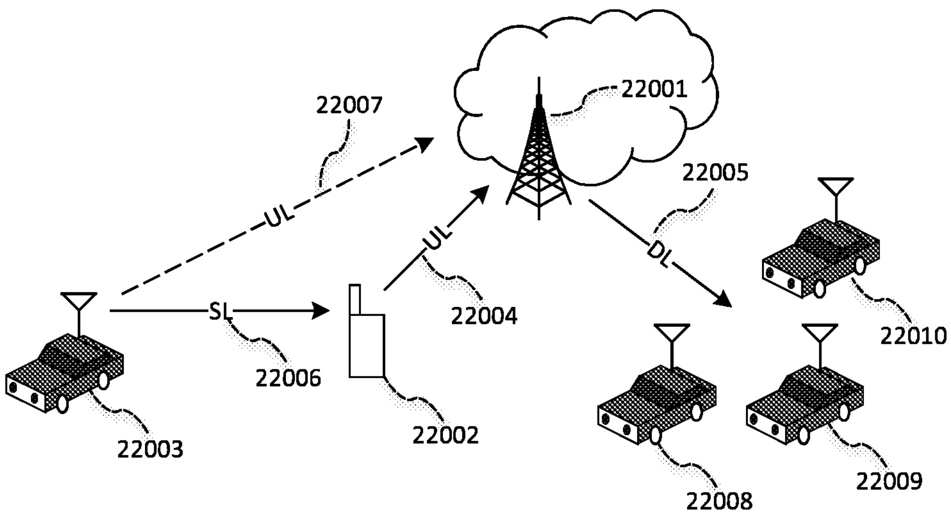

FIG 221

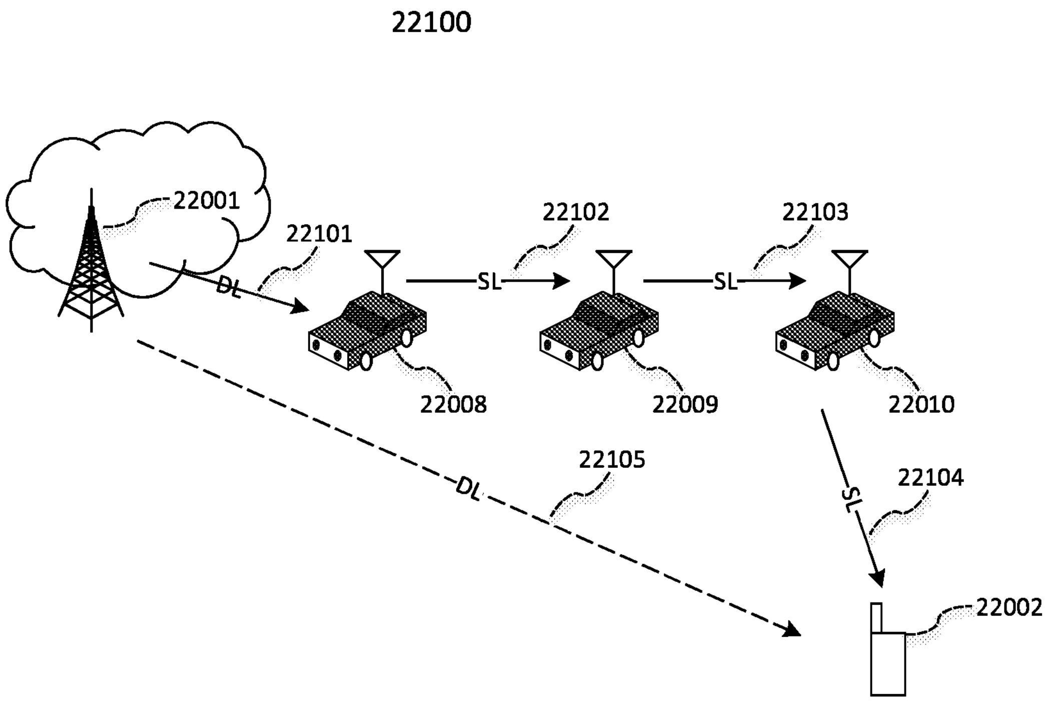
22100
22001
22101
DL
22102
SL
22103
SL
22008
22009
22010
22105
DL
22104
SL
22002

FIG 222

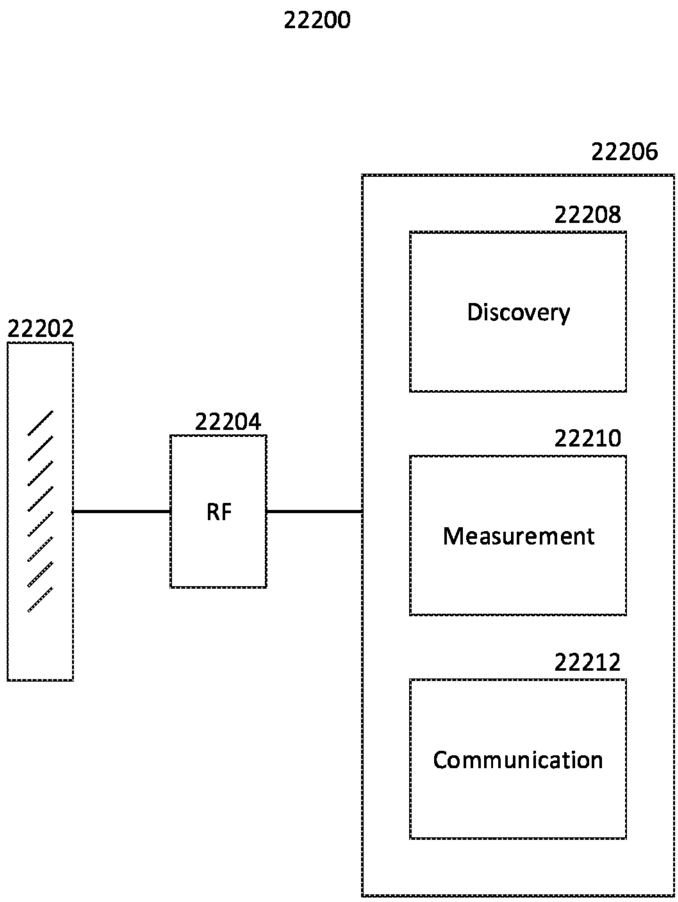
22200
22206
22208
Discovery
22202
22204
RF
22210
Measurement
22212
Communication

FIG 223

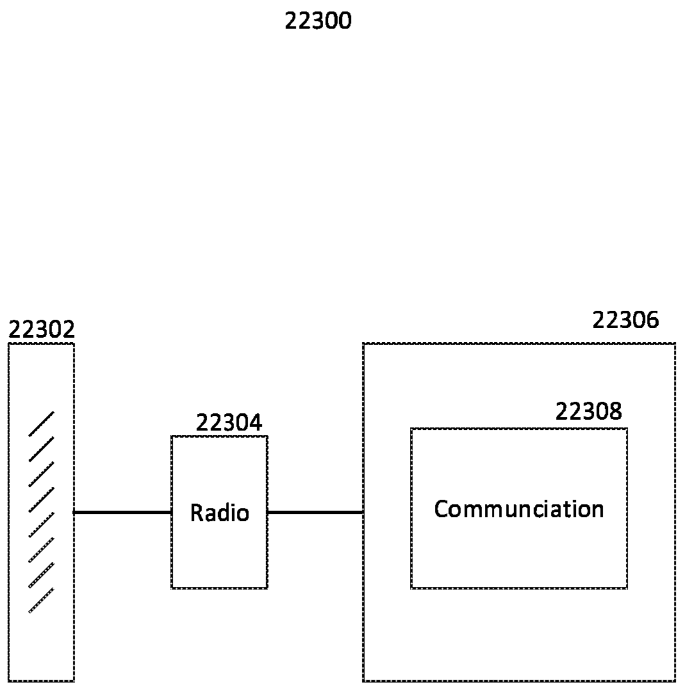

FIG 224

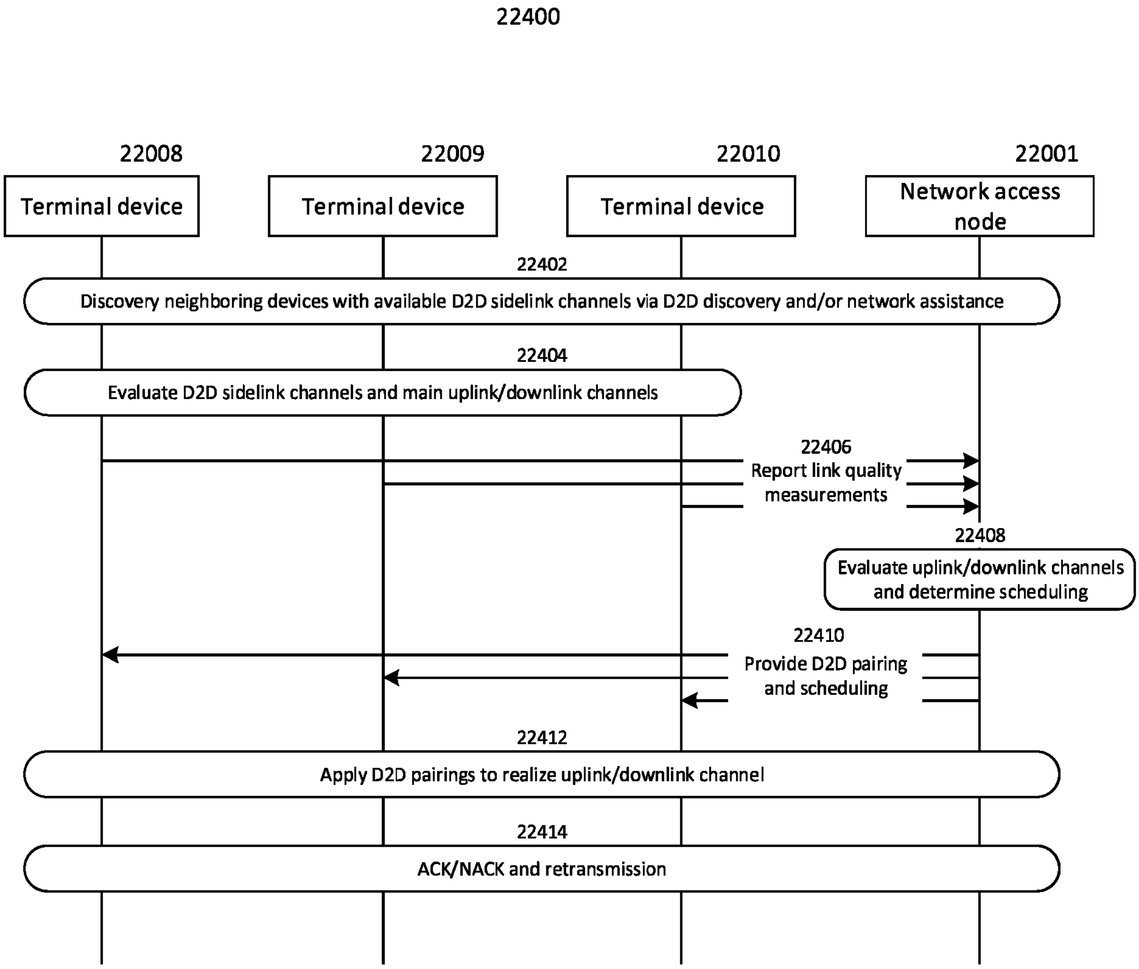
22400
22008
22009
22010
22001
Terminal device
Terminal device
Terminal device
Network access node
22402
Discovery neighboring devices with available D2D sidelink channels via D2D discovery and/or network assistance
22404
Evaluate D2D sidelink channels and main uplink/downlink channels
22406
Report link quality measurements
22408
Evaluate uplink/downlink channels and determine scheduling
22410
Provide D2D pairing and scheduling
22412
Apply D2D pairings to realize uplink/downlink channel
22414
ACK/NACK and retransmission

FIG 225

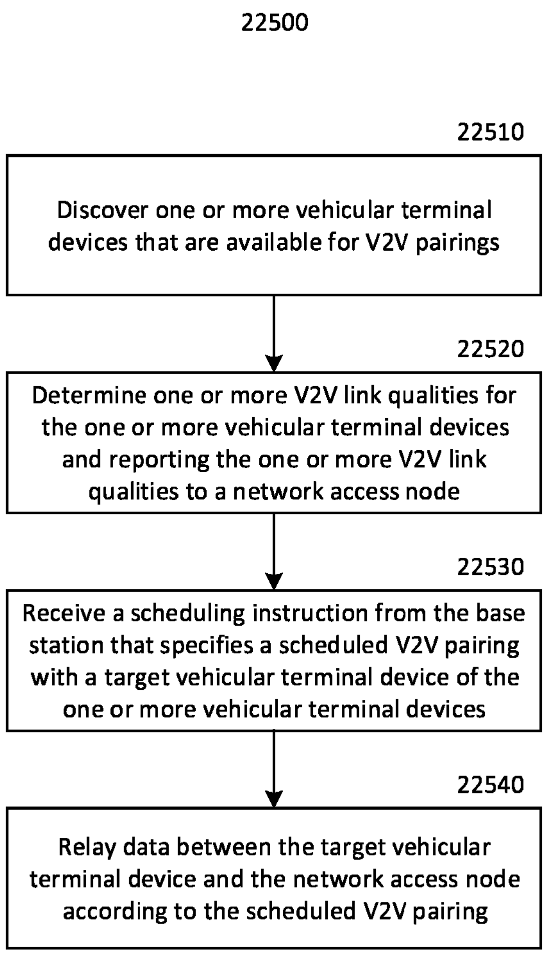
22500
22510
Discover one or more vehicular terminal devices that are available for V2V pairings
22520
Determine one or more V2V link qualities for the one or more vehicular terminal devices and reporting the one or more V2V link qualities to a network access node
22530
Receive a scheduling instruction from the base station that specifies a scheduled V2V pairing with a target vehicular terminal device of the one or more vehicular terminal devices
22540
Relay data between the target vehicular terminal device and the network access node according to the scheduled V2V pairing

FIG 226

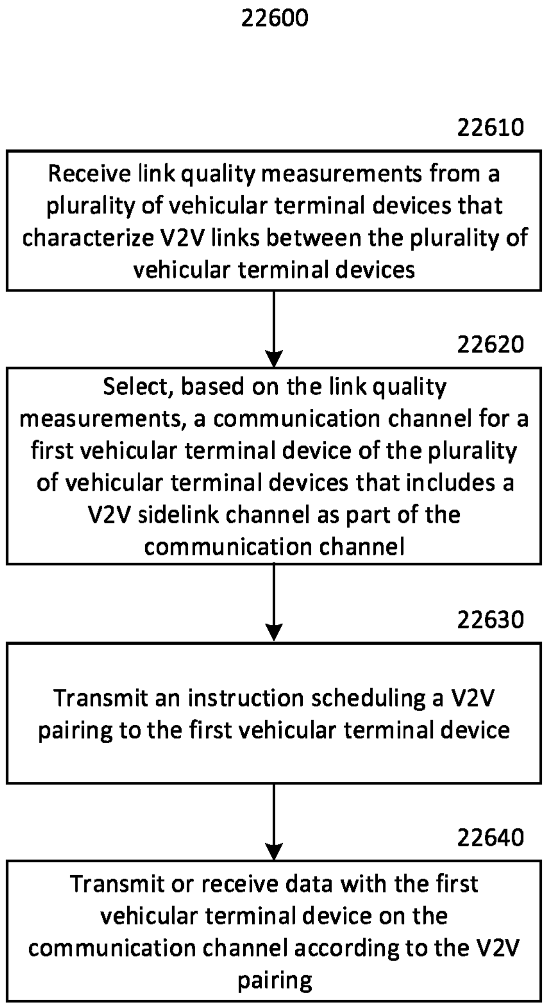
22600
22610
Receive link quality measurements from a plurality of vehicular terminal devices that characterize V2V links between the plurality of vehicular terminal devices
22620
Select, based on the link quality measurements, a communication channel for a first vehicular terminal device of the plurality of vehicular terminal devices that includes a V2V sidelink channel as part of the communication channel
22630
Transmit an instruction scheduling a V2V pairing to the first vehicular terminal device
22640
Transmit or receive data with the first vehicular terminal device on the communication channel according to the V2V pairing

FIG 227

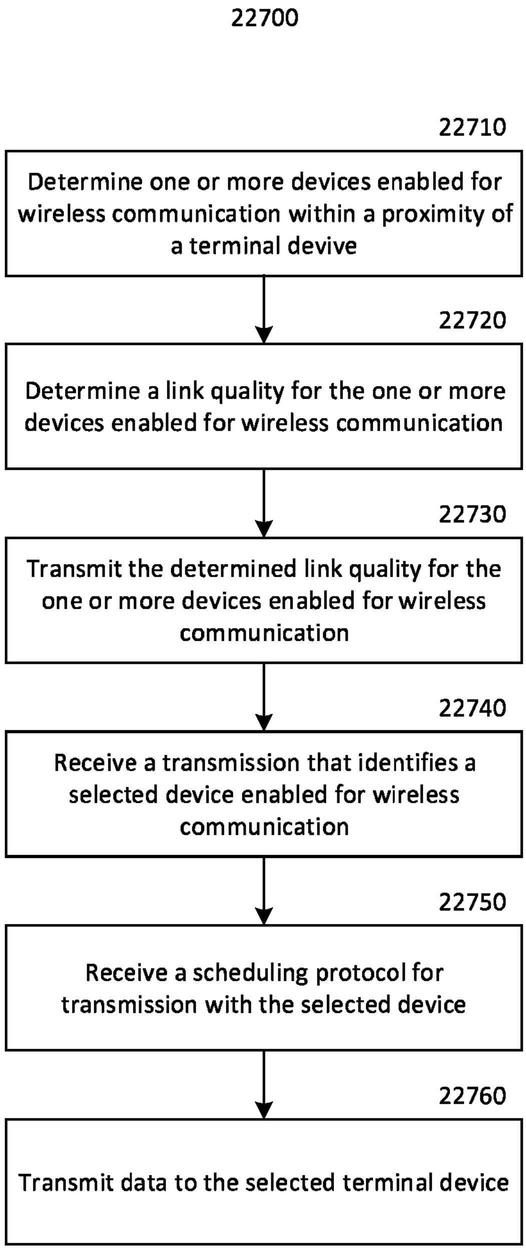
22700
22710
Determine one or more devices enabled for wireless communication within a proximity of a terminal devive
22720
Determine a link quality for the one or more devices enabled for wireless communication
22730
Transmit the determined link quality for the one or more devices enabled for wireless communication
22740
Receive a transmission that identifies a selected device enabled for wireless communication
22750
Receive a scheduling protocol for transmission with the selected device
22760
Transmit data to the selected terminal device

FIG 228

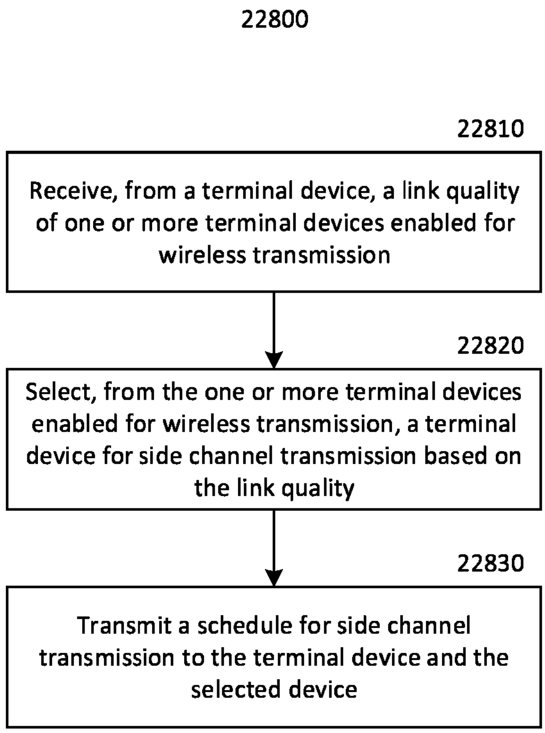
22800
22810
Receive, from a terminal device, a link quality of one or more terminal devices enabled for wireless transmission
22820
Select, from the one or more terminal devices enabled for wireless transmission, a terminal device for side channel transmission based on the link quality
22830
Transmit a schedule for side channel transmission to the terminal device and the selected device

FIG 229

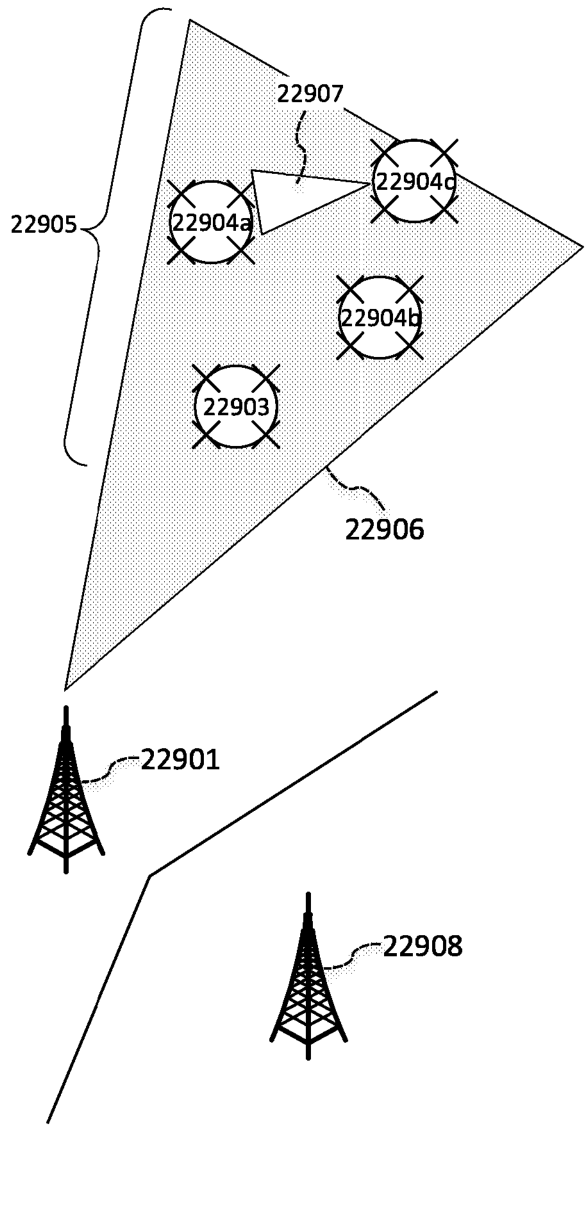

FIG 230

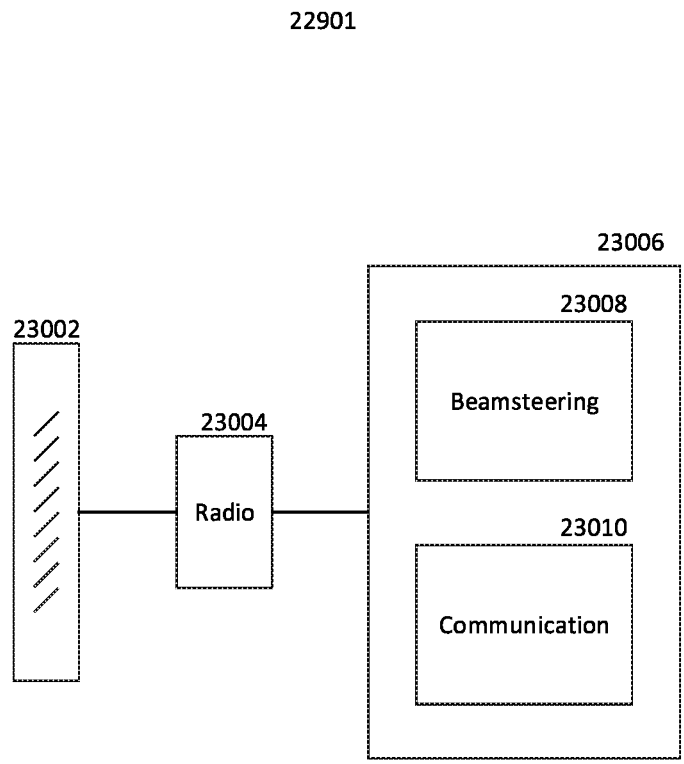
22901
23006
23008
Beamsteering
23002
23004
Radio
23010
Communication

FIG 231

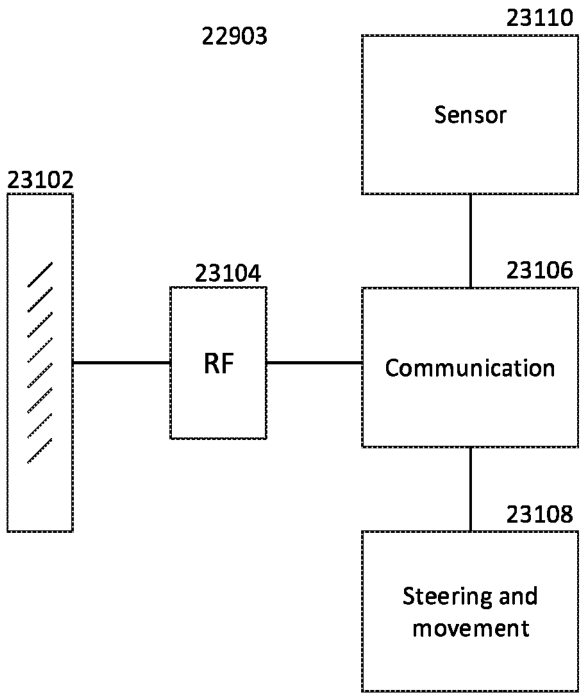
22903
23110
Sensor
23102
23104
RF
23106
Communication
23108
Steering and movement

FIG 232

22904a

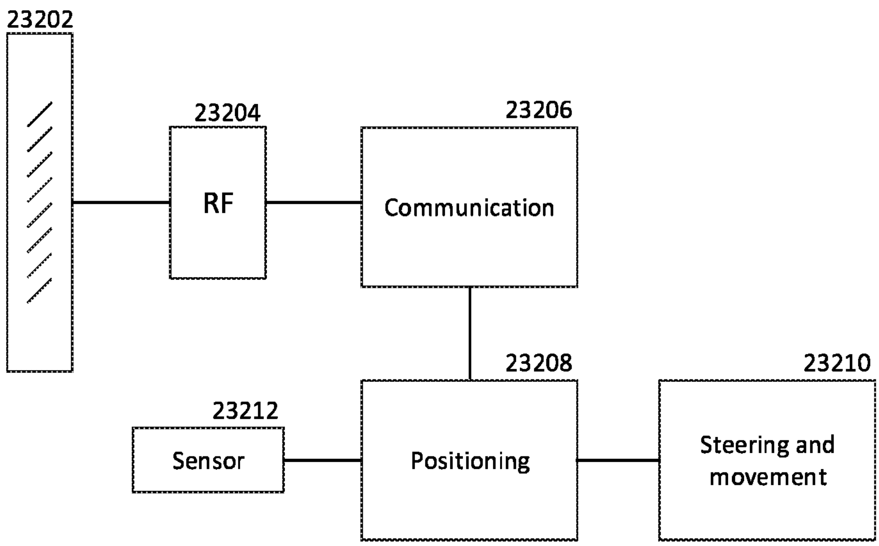

FIG 233

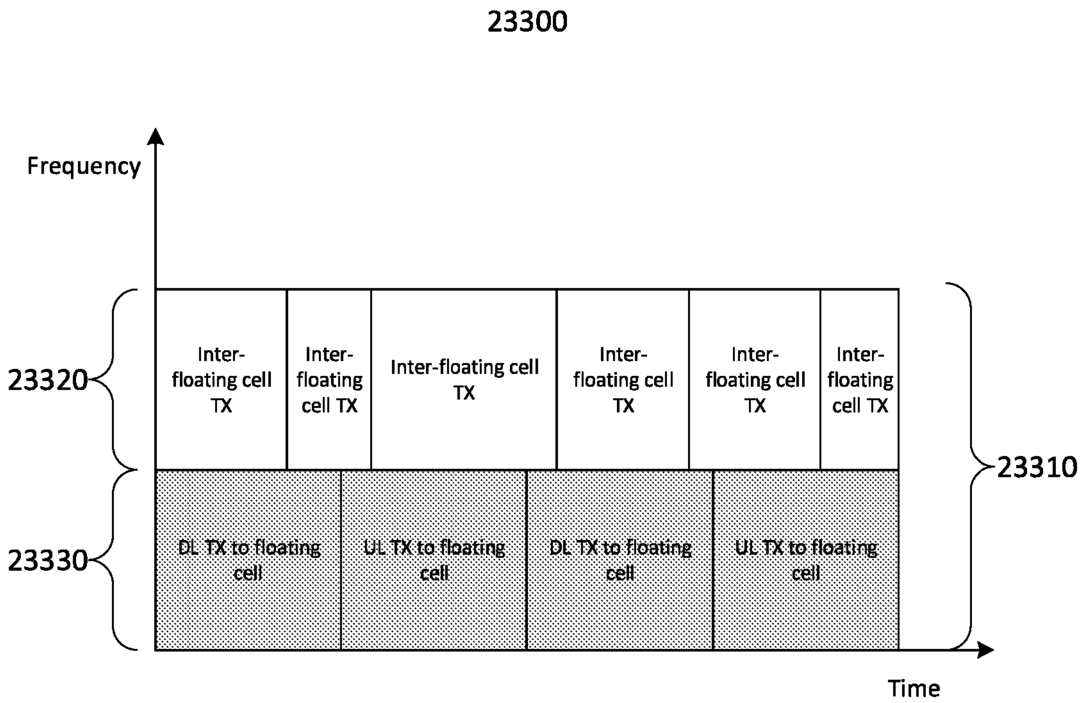
23300
Frequency
Time
23320
23330
23310
Inter-floating cell TX
Inter-floating cell TX
Inter-floating cell TX
Inter-floating cell TX
Inter-floating cell TX
Inter-floating cell TX
DL TX to floating cell
UL TX to floating cell
DL TX to floating cell
UL TX to floating cell

FIG 234

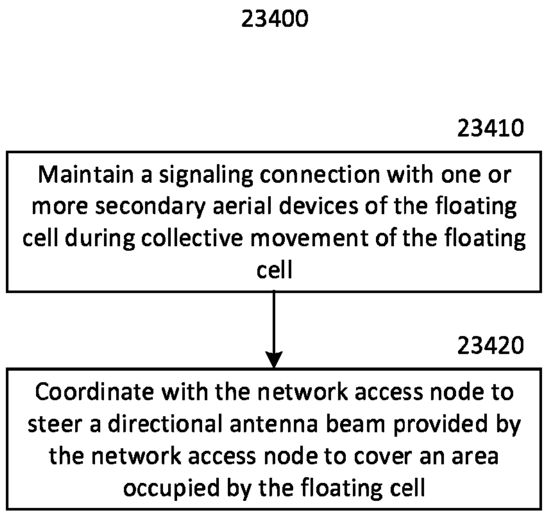
23400
23410
Maintain a signaling connection with one or more secondary aerial devices of the floating cell during collective movement of the floating cell
23420
Coordinate with the network access node to steer a directional antenna beam provided by the network access node to cover an area occupied by the floating cell

FIG 235

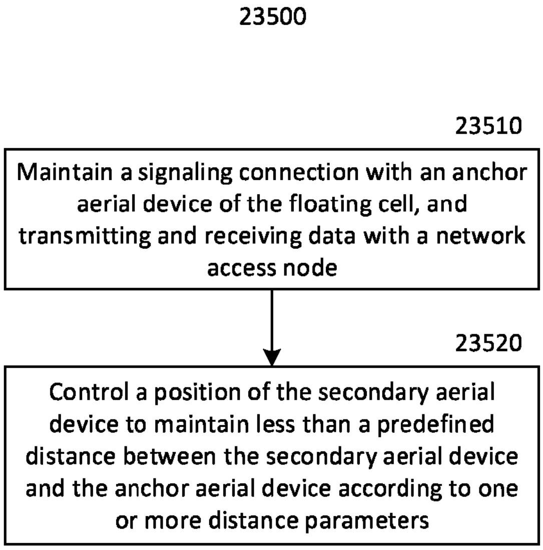
23500
23510
Maintain a signaling connection with an anchor aerial device of the floating cell, and transmitting and receiving data with a network access node
23520
Control a position of the secondary aerial device to maintain less than a predefined distance between the secondary aerial device and the anchor aerial device according to one or more distance parameters

FIG 236

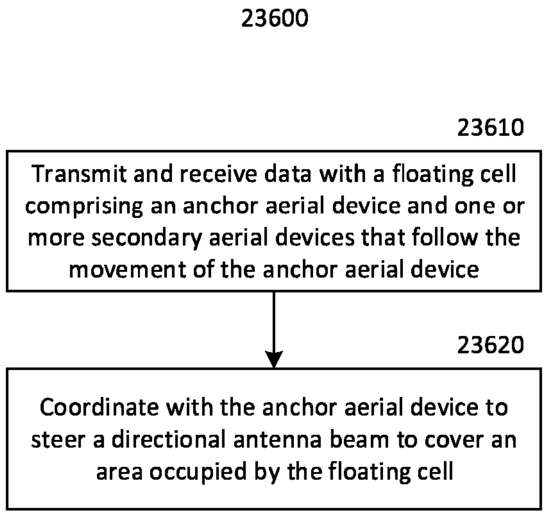
23600
23610
Transmit and receive data with a floating cell comprising an anchor aerial device and one or more secondary aerial devices that follow the movement of the anchor aerial device
23620
Coordinate with the anchor aerial device to steer a directional antenna beam to cover an area occupied by the floating cell

FIG 237

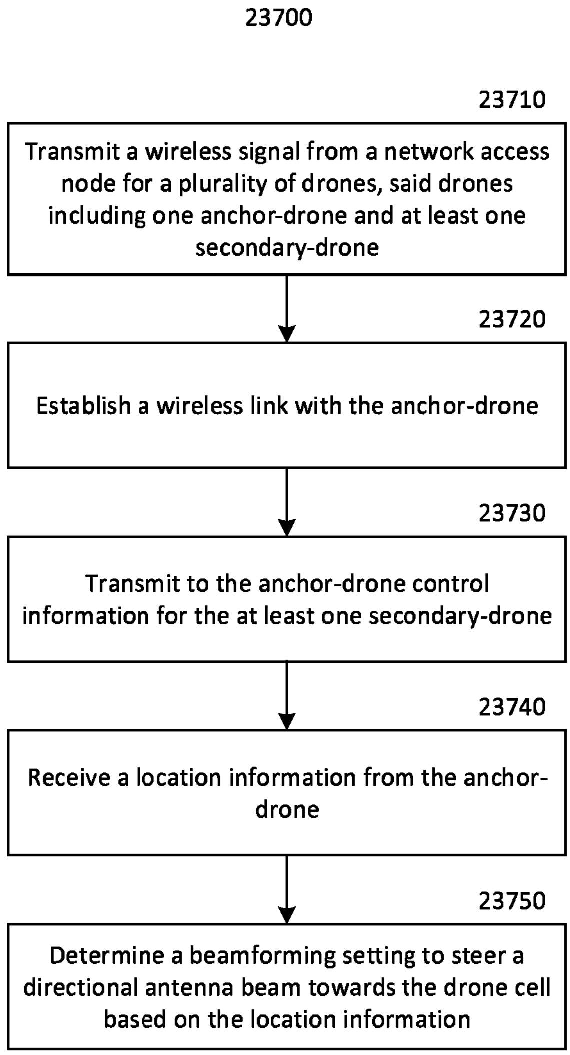
23700
23710
Transmit a wireless signal from a network access node for a plurality of drones, said drones including one anchor-drone and at least one secondary-drone
23720
Establish a wireless link with the anchor-drone
23730
Transmit to the anchor-drone control information for the at least one secondary-drone
23740
Receive a location information from the anchor-drone
23750
Determine a beamforming setting to steer a directional antenna beam towards the drone cell based on the location information

FIG 238

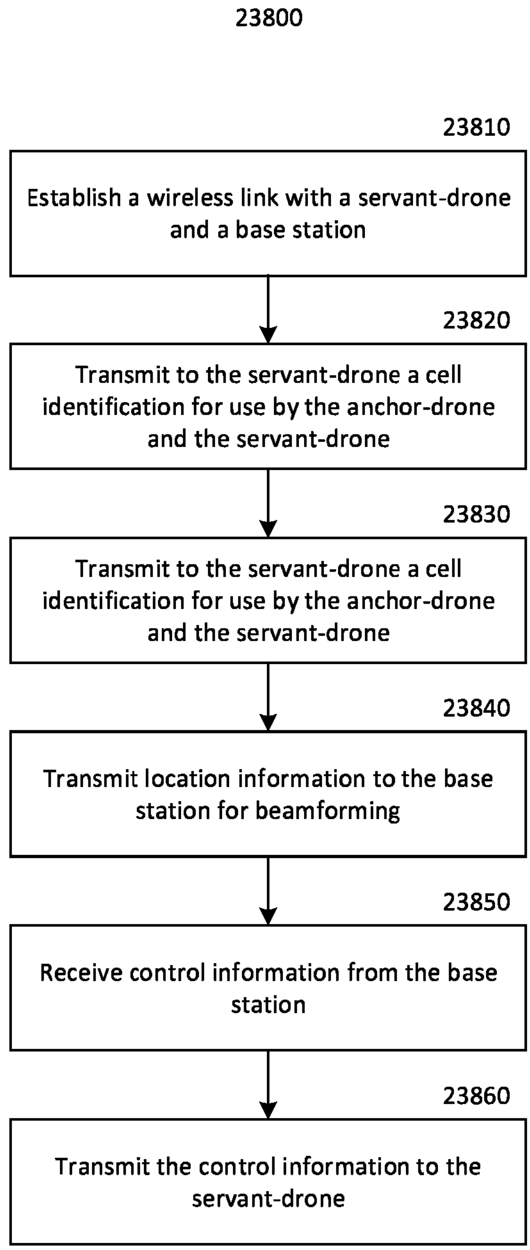
23800
23810
Establish a wireless link with a servant-drone and a base station
23820
Transmit to the servant-drone a cell identification for use by the anchor-drone and the servant-drone
23830
Transmit to the servant-drone a cell identification for use by the anchor-drone and the servant-drone
23840
Transmit location information to the base station for beamforming
23850
Receive control information from the base station
23860
Transmit the control information to the servant-drone

FIG 239

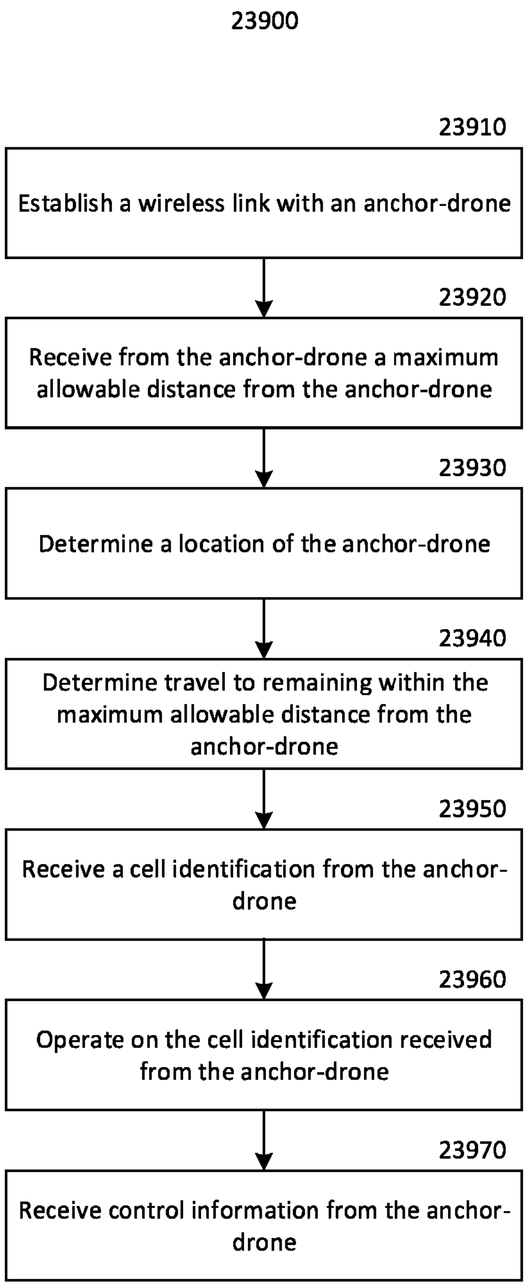
23900
23910
Establish a wireless link with an anchor-drone
23920
Receive from the anchor-drone a maximum allowable distance from the anchor-drone
23930
Determine a location of the anchor-drone
23940
Determine travel to remaining within the maximum allowable distance from the anchor-drone
23950
Receive a cell identification from the anchor-drone
23960
Operate on the cell identification received from the anchor-drone
23970
Receive control information from the anchor-drone

FIG 240

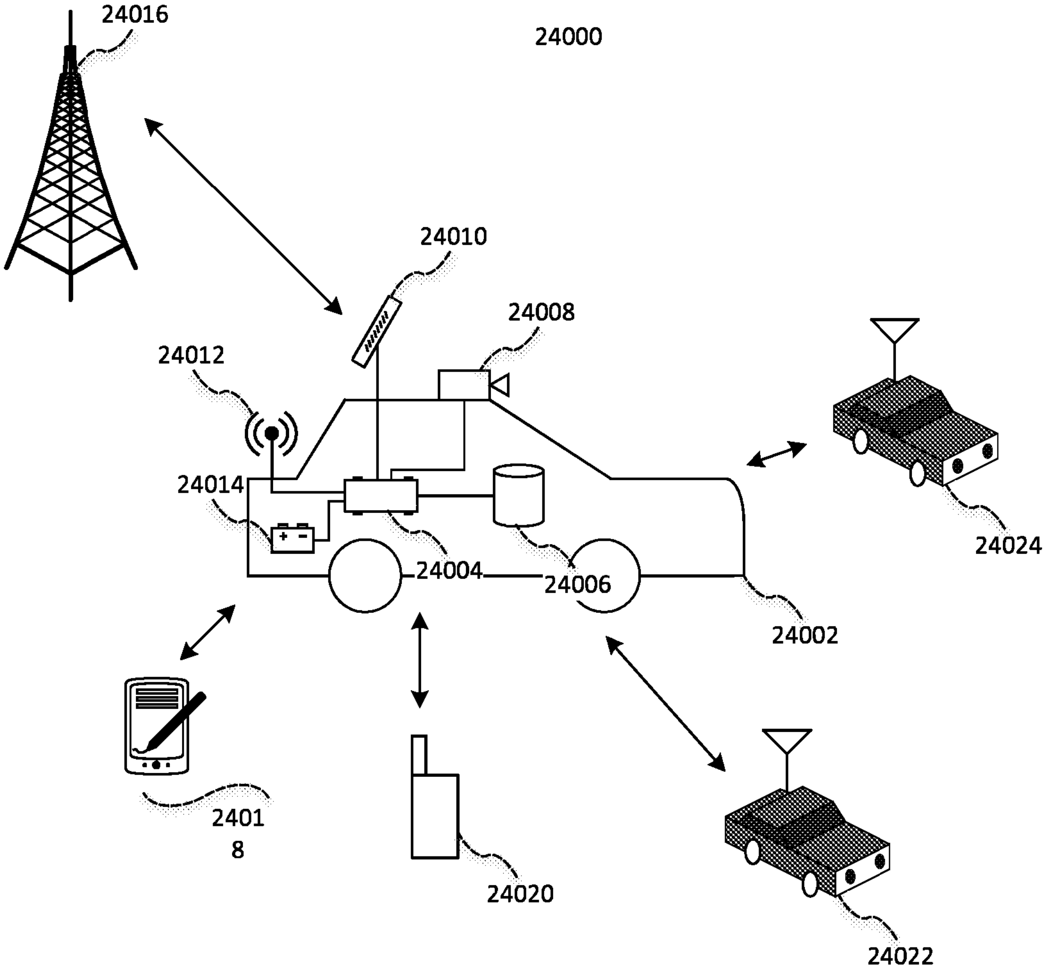
24016
24000
24010
24008
24012
24014
24004
24006
24024
24002
2401
8
24020
24022

FIG 241

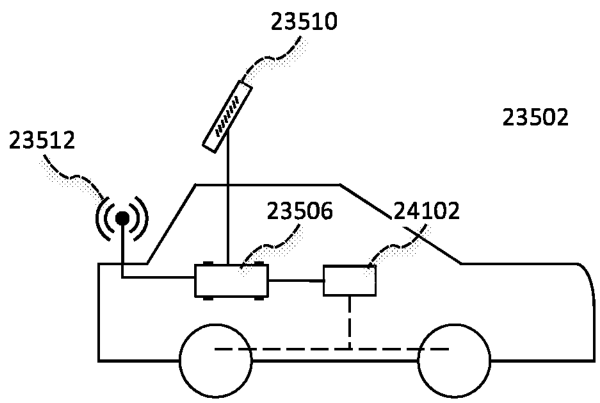

FIG 242

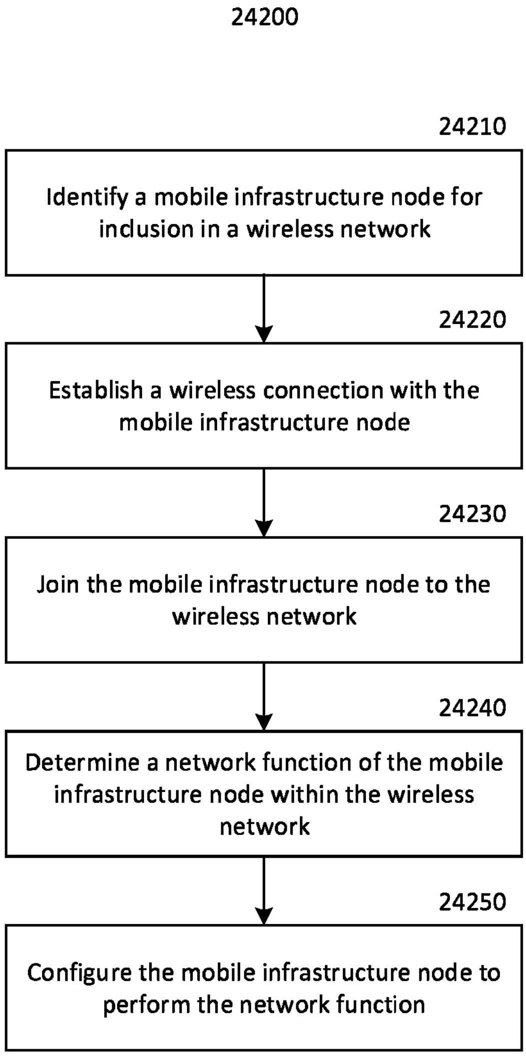
24200
24210
Identify a mobile infrastructure node for inclusion in a wireless network
24220
Establish a wireless connection with the mobile infrastructure node
24230
Join the mobile infrastructure node to the wireless network
24240
Determine a network function of the mobile infrastructure node within the wireless network
24250
Configure the mobile infrastructure node to perform the network function

FIG 243

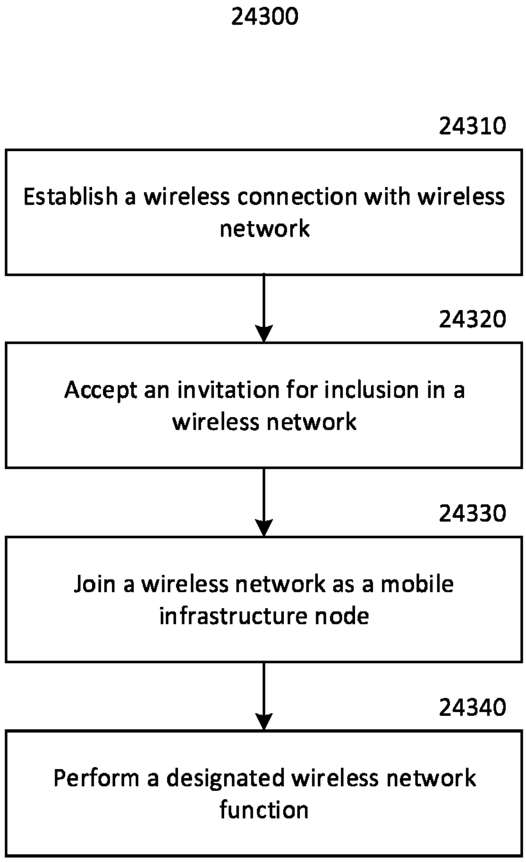
24300
24310
Establish a wireless connection with wireless network
24320
Accept an invitation for inclusion in a wireless network
24330
Join a wireless network as a mobile infrastructure node
24340
Perform a designated wireless network function

FIG 244

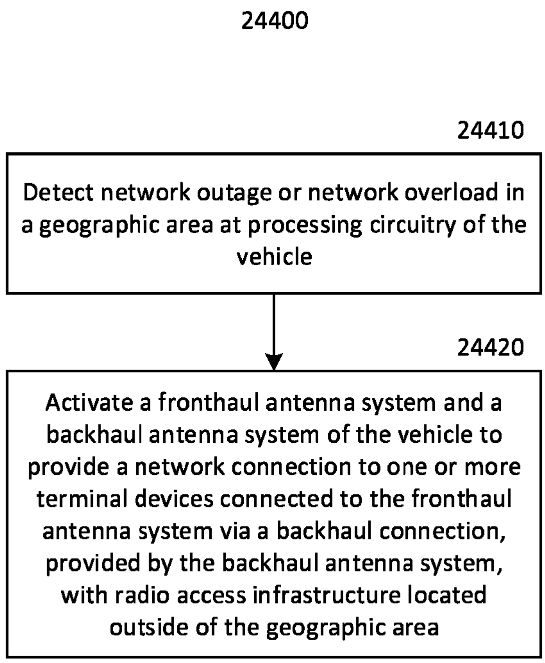
24400
24410
Detect network outage or network overload in a geographic area at processing circuitry of the vehicle
24420
Activate a fronthaul antenna system and a backhaul antenna system of the vehicle to provide a network connection to one or more terminal devices connected to the fronthaul antenna system via a backhaul connection, provided by the backhaul antenna system, with radio access infrastructure located outside of the geographic area

FIG 245

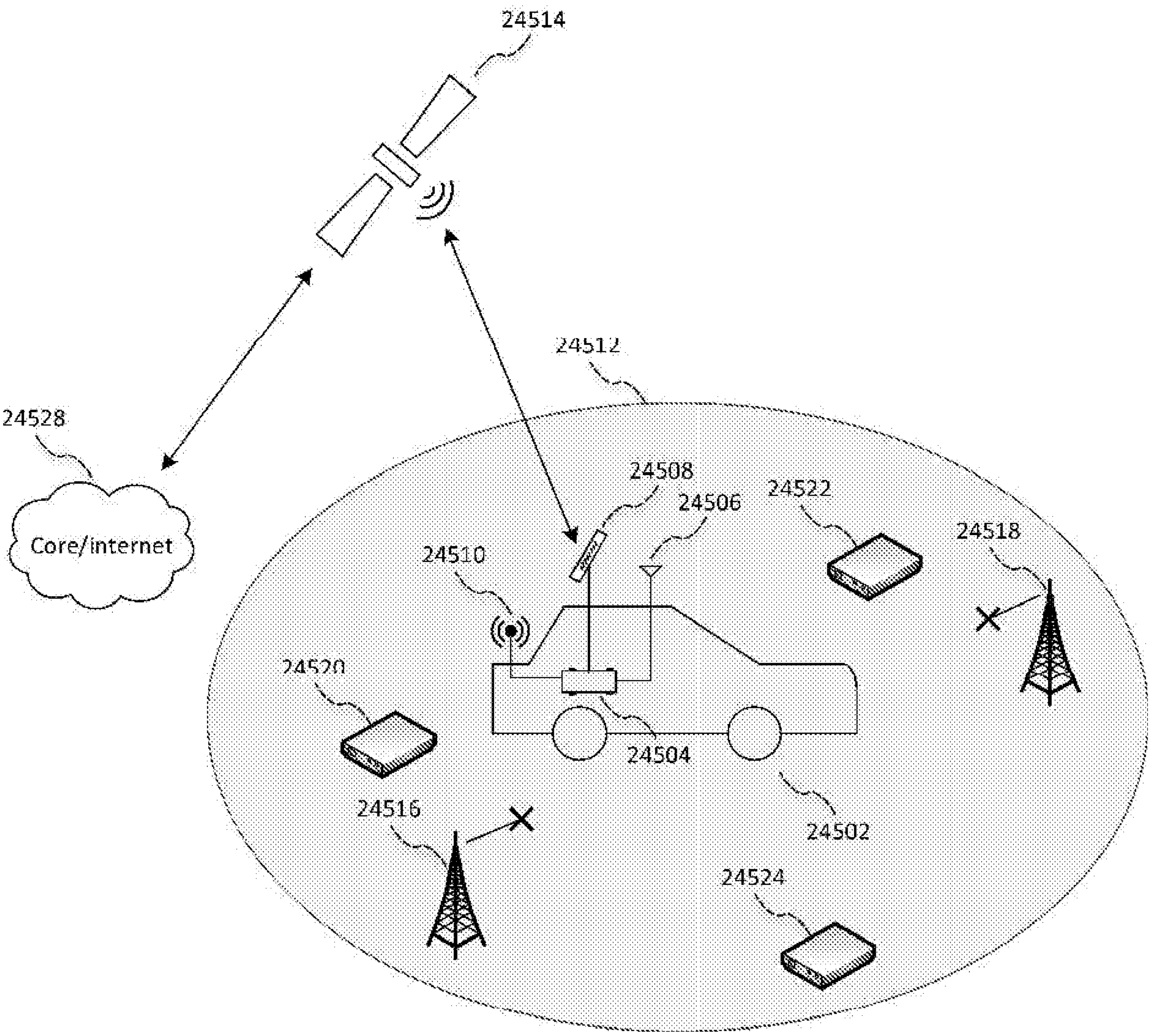
24514
24512
24528
Core/internet
24508
24506
24522
24518
24510
24520
24504
24516
24502
24524

FIG 246

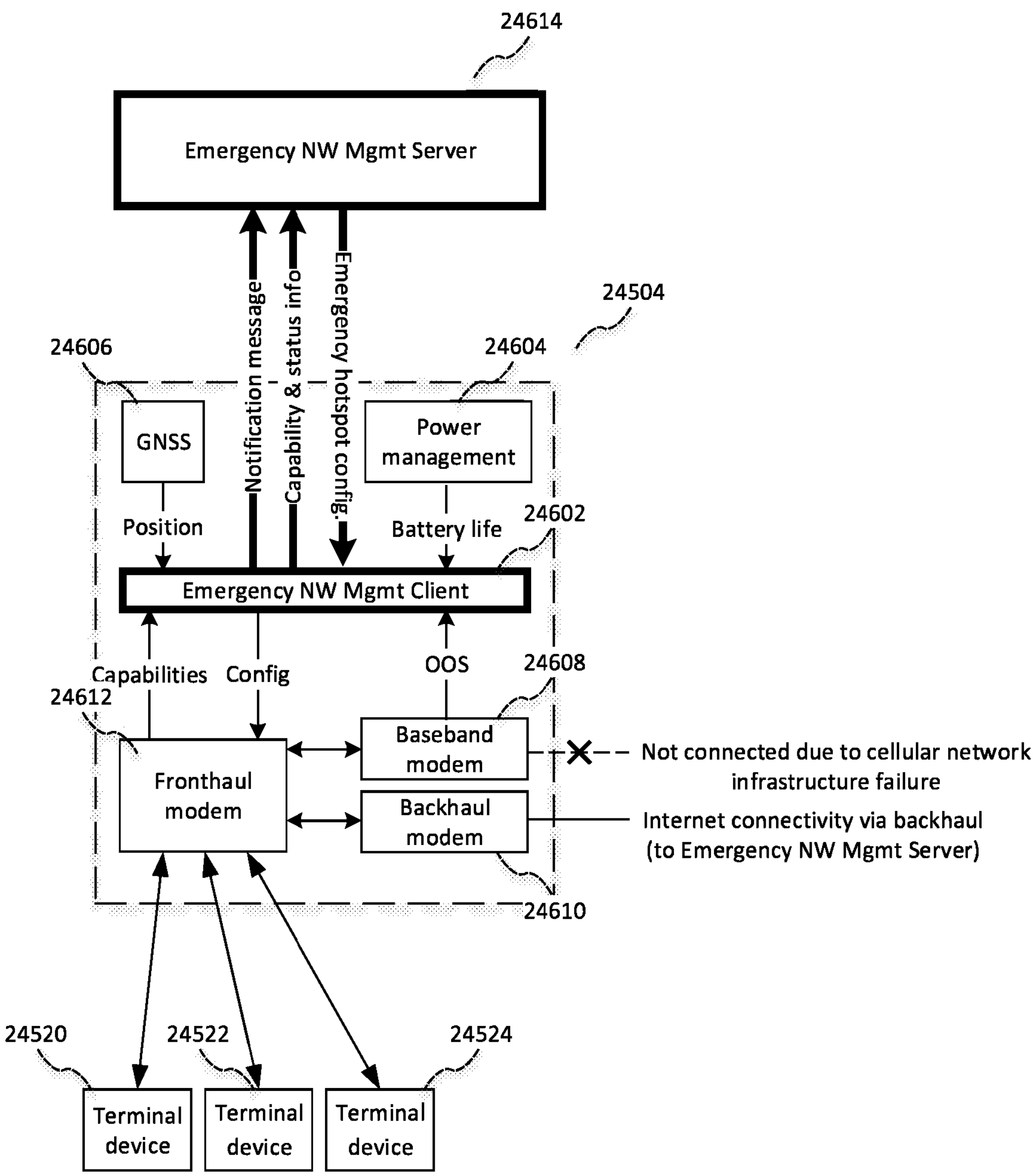
24614
Emergency NW Mgmt Server
Notification message
Capability & status info
Emergency hotspot config.
24504
24606
24604
GNSS
Power management
Position
Battery life
24602
Emergency NW Mgmt Client
Capabilities
Config
OOS
24608
24612
Baseband modem
Not connected due to cellular network infrastructure failure
Fronthaul modem
Backhaul modem
Internet connectivity via backhaul (to Emergency NW Mgmt Server)
24610
24520
24522
24524
Terminal device
Terminal device
Terminal device

FIG 247

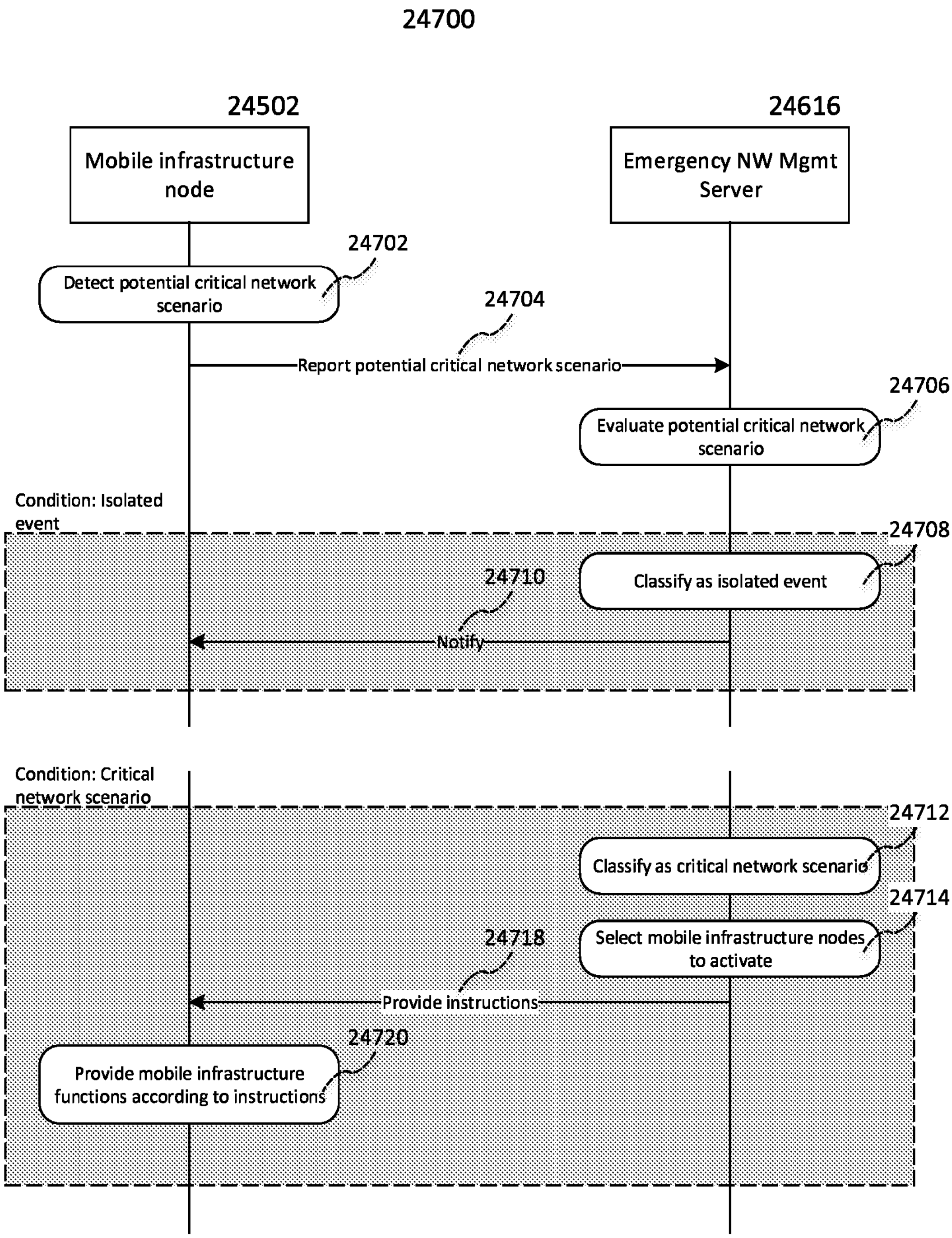
24700
24502
Mobile infrastructure node
24616
Emergency NW Mgmt Server
24702
Detect potential critical network scenario
24704
Report potential critical network scenario
24706
Evaluate potential critical network scenario
Condition: Isolated event
24708
Classify as isolated event
24710
Notify
Condition: Critical network scenario
24712
Classify as critical network scenario
24714
Select mobile infrastructure nodes to activate
24718
Provide instructions
24720
Provide mobile infrastructure functions according to instructions

FIG 248

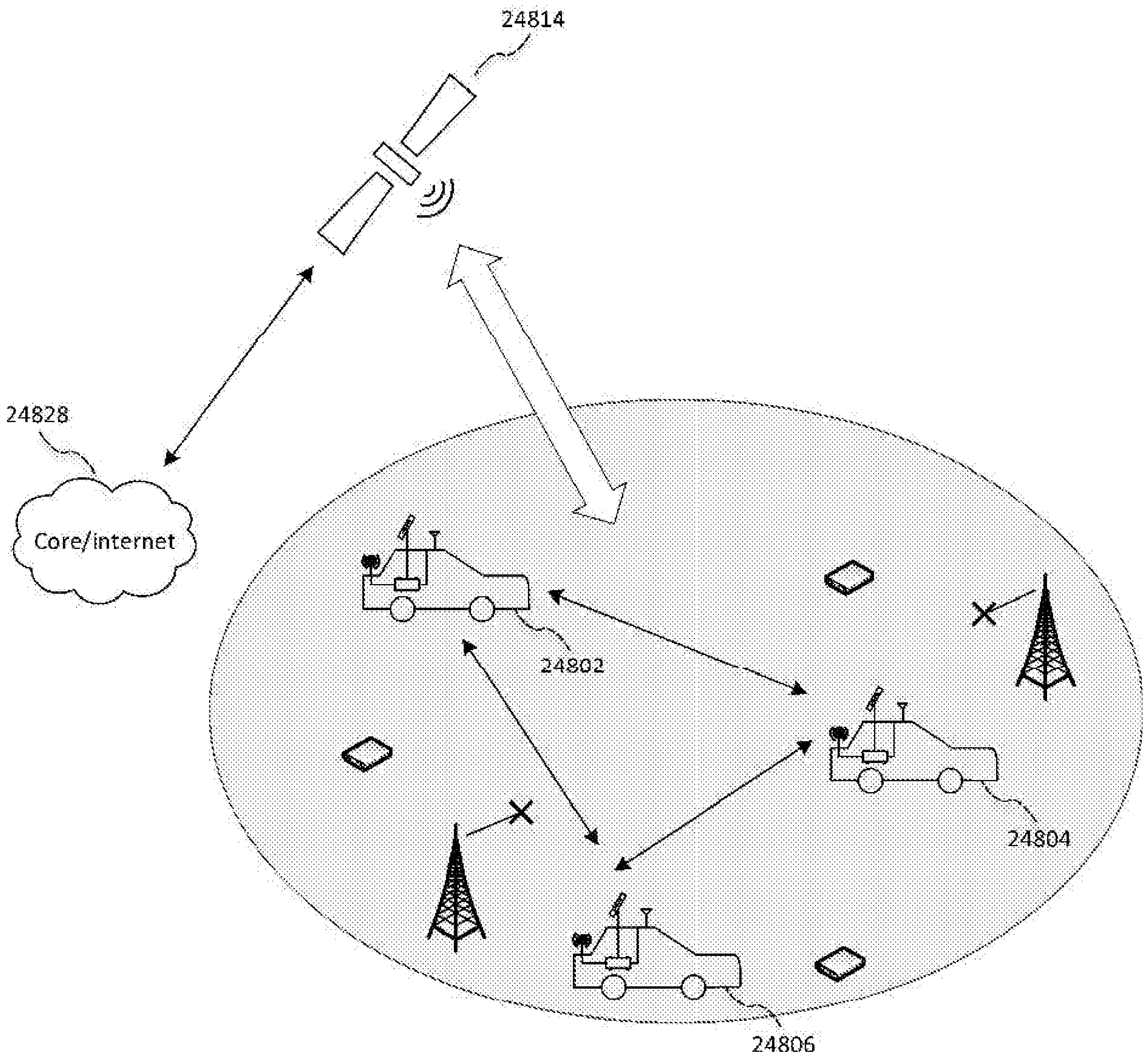

FIG 249

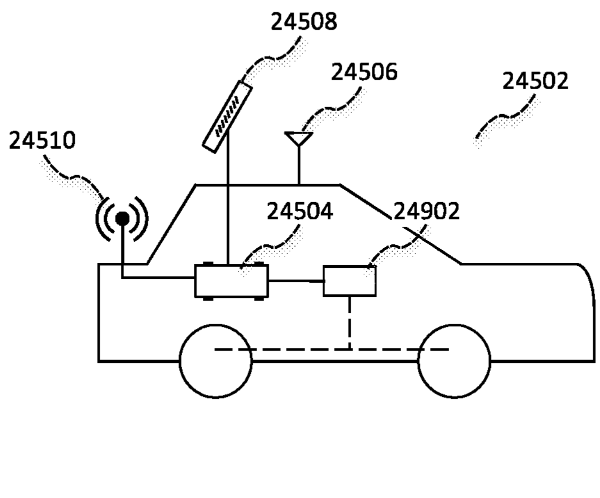

FIG 250

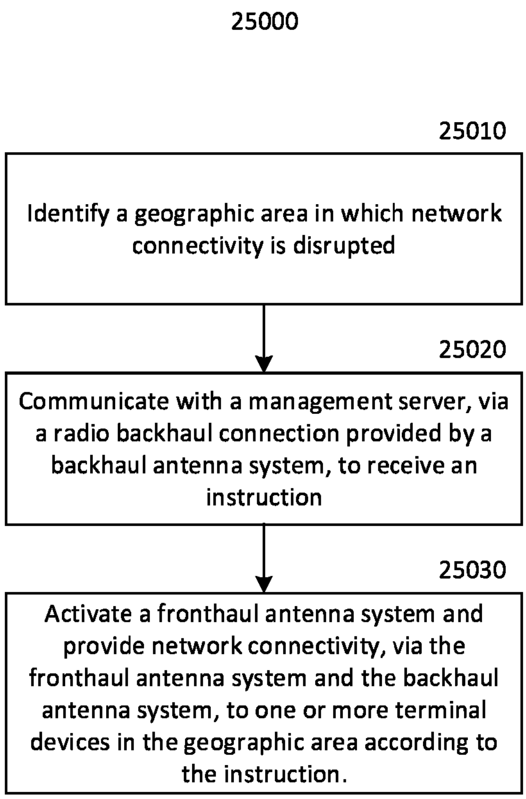
25000
25010
Identify a geographic area in which network connectivity is disrupted
25020
Communicate with a management server, via a radio backhaul connection provided by a backhaul antenna system, to receive an instruction
25030
Activate a fronthaul antenna system and provide network connectivity, via the fronthaul antenna system and the backhaul antenna system, to one or more terminal devices in the geographic area according to the instruction.

FIG 251

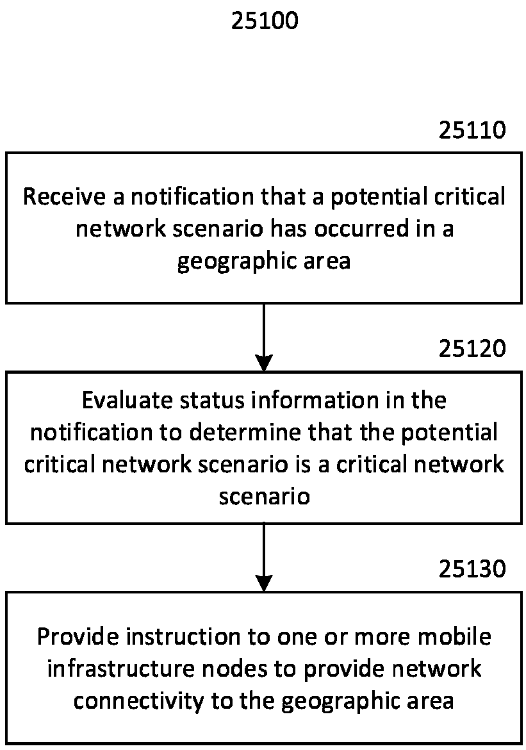
25100
25110
Receive a notification that a potential critical network scenario has occurred in a geographic area
25120
Evaluate status information in the notification to determine that the potential critical network scenario is a critical network scenario
25130
Provide instruction to one or more mobile infrastructure nodes to provide network connectivity to the geographic area

FIG 252

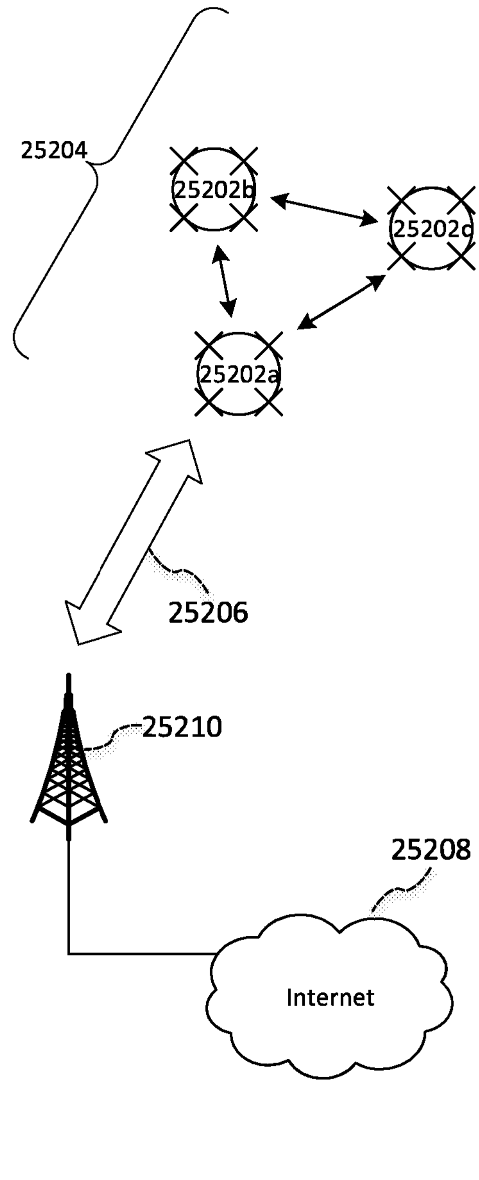

FIG 253

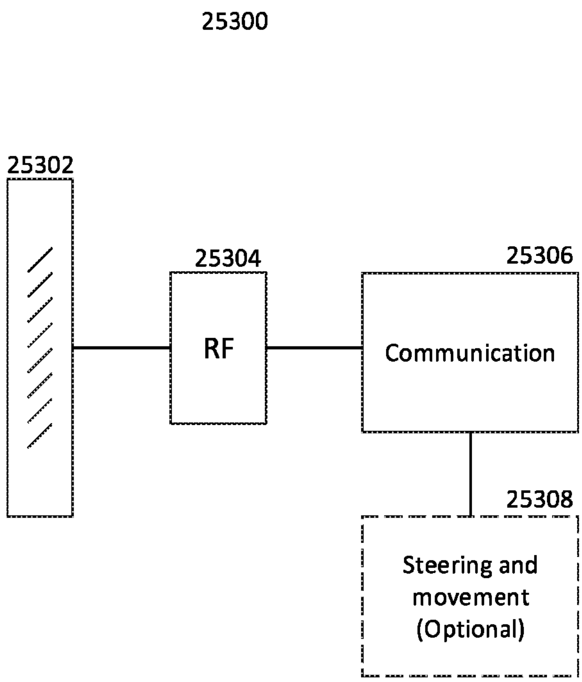
25300
25302
25304
RF
25306
Communication
25308
Steering and
movement
(Optional)

FIG 254

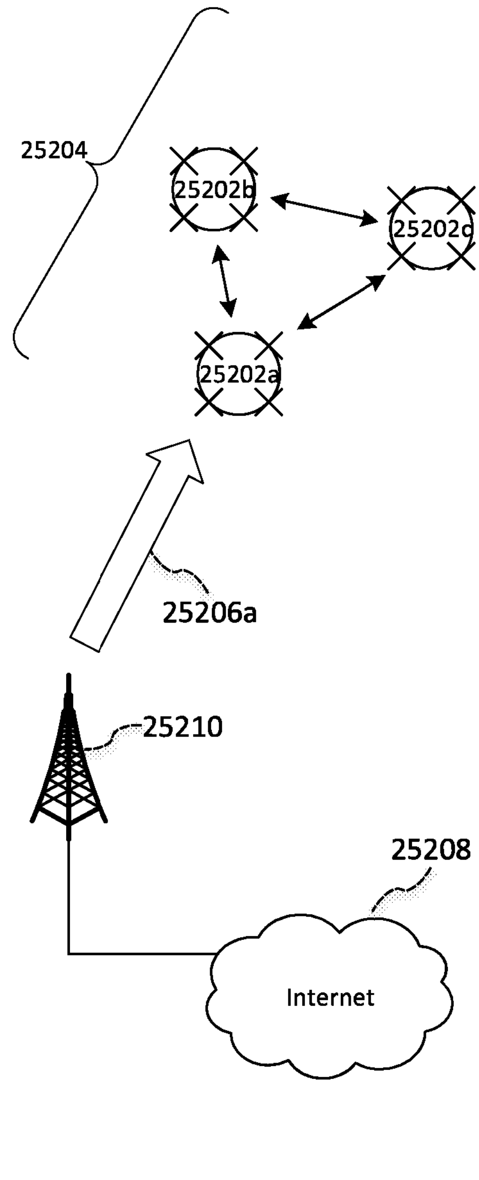

FIG 255

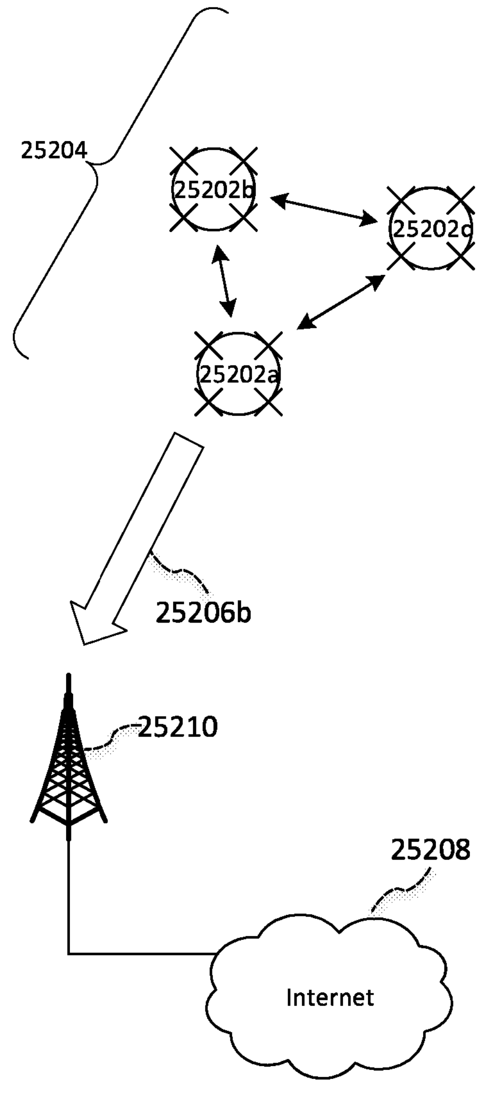

FIG 256

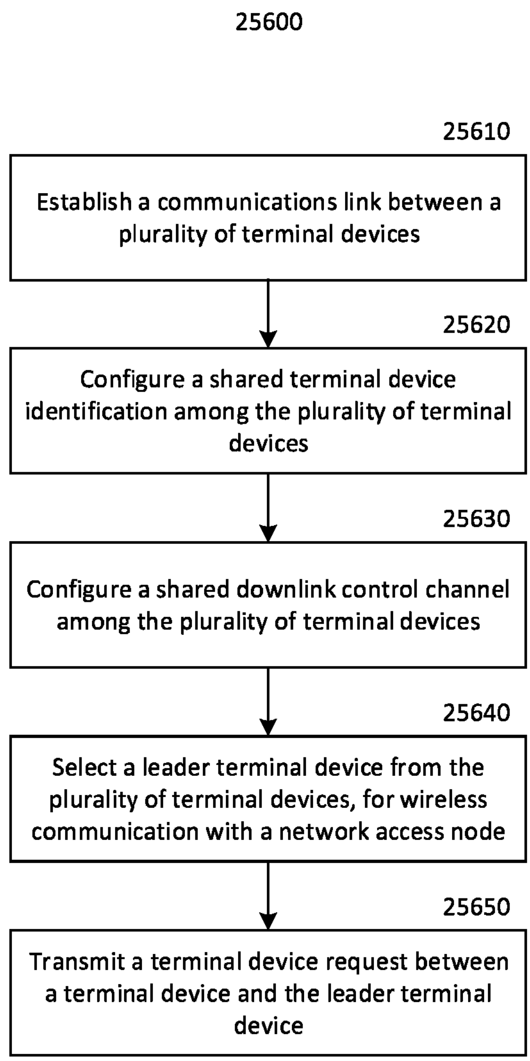
25600
25610
Establish a communications link between a plurality of terminal devices
25620
Configure a shared terminal device identification among the plurality of terminal devices
25630
Configure a shared downlink control channel among the plurality of terminal devices
25640
Select a leader terminal device from the plurality of terminal devices, for wireless communication with a network access node
25650
Transmit a terminal device request between a terminal device and the leader terminal device

FIG 257

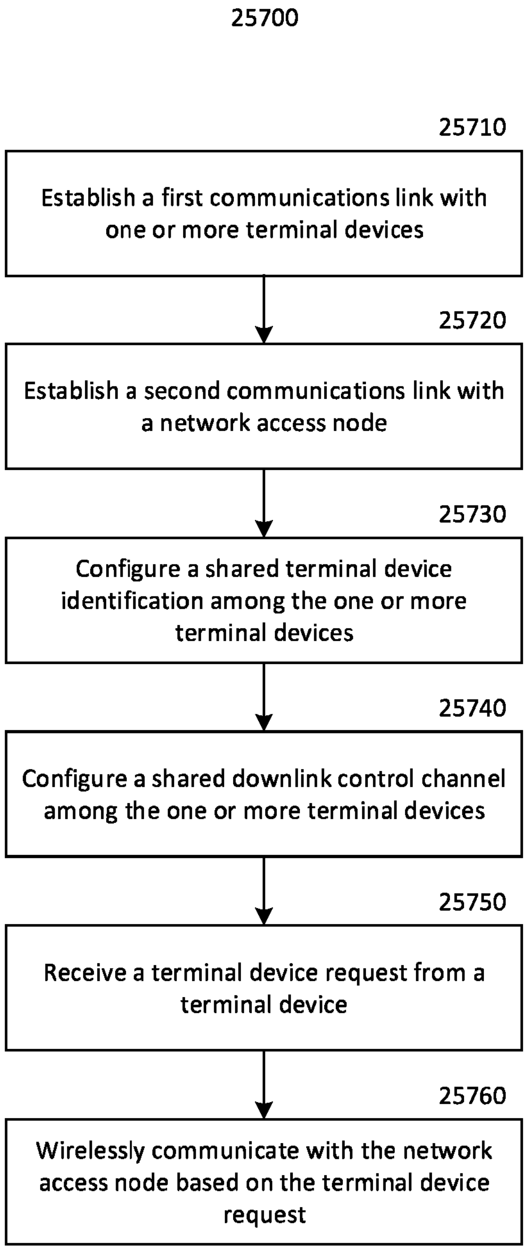
25700
25710
Establish a first communications link with one or more terminal devices
25720
Establish a second communications link with a network access node
25730
Configure a shared terminal device identification among the one or more terminal devices
25740
Configure a shared downlink control channel among the one or more terminal devices
25750
Receive a terminal device request from a terminal device
25760
Wirelessly communicate with the network access node based on the terminal device request

FIG 258

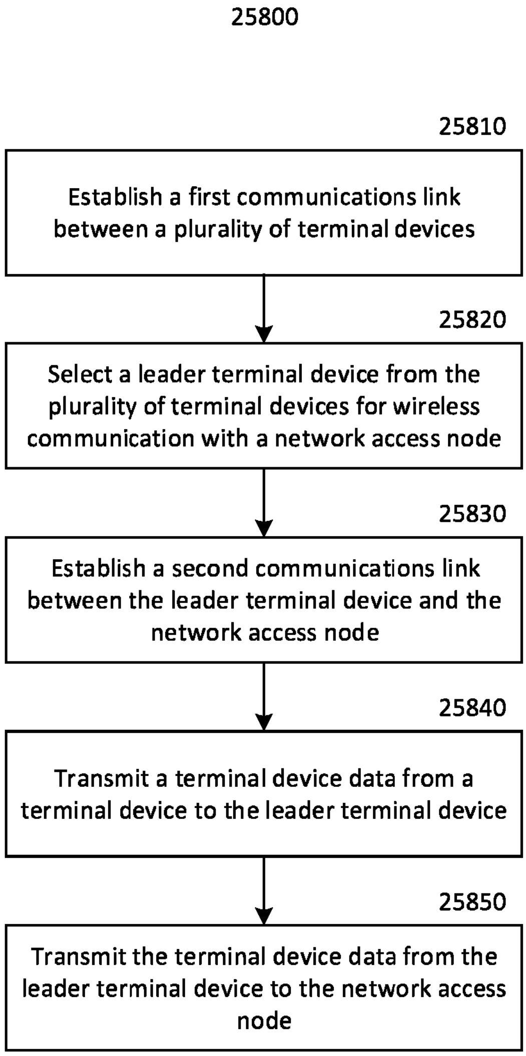
25800
25810
Establish a first communications link between a plurality of terminal devices
25820
Select a leader terminal device from the plurality of terminal devices for wireless communication with a network access node
25830
Establish a second communications link between the leader terminal device and the network access node
25840
Transmit a terminal device data from a terminal device to the leader terminal device
25850
Transmit the terminal device data from the leader terminal device to the network access node

FIG 259

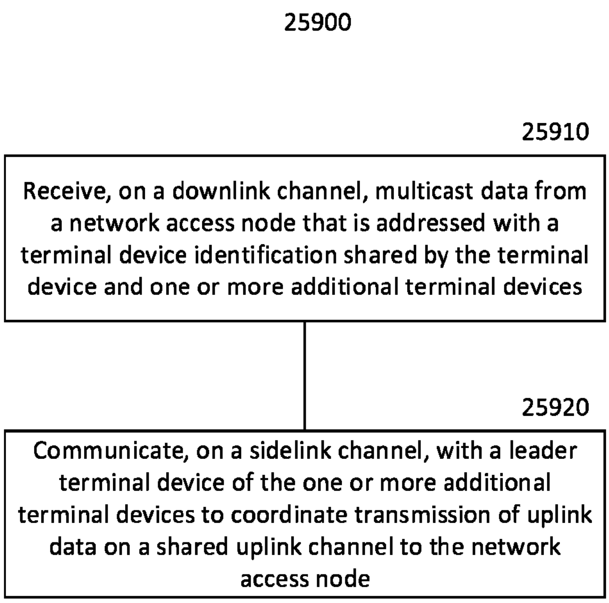
25900
25910
Receive, on a downlink channel, multicast data from a network access node that is addressed with a terminal device identification shared by the terminal device and one or more additional terminal devices
25920
Communicate, on a sidelink channel, with a leader terminal device of the one or more additional terminal devices to coordinate transmission of uplink data on a shared uplink channel to the network access node

FIG 260

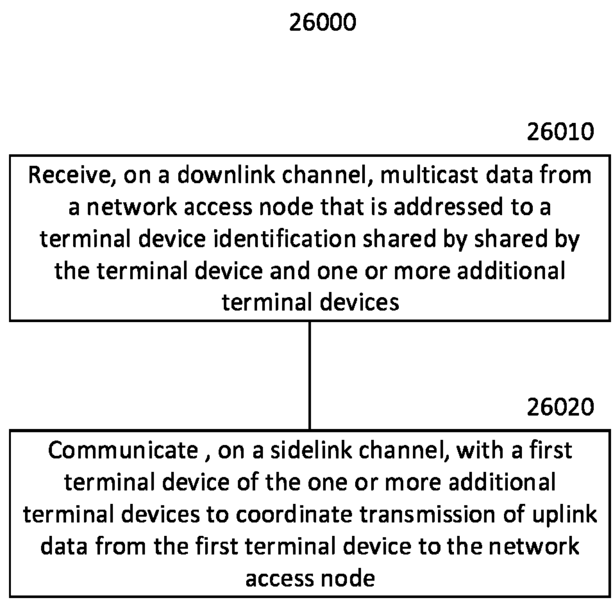
26000
26010
Receive, on a downlink channel, multicast data from a network access node that is addressed to a terminal device identification shared by shared by the terminal device and one or more additional terminal devices
26020
Communicate , on a sidelink channel, with a first terminal device of the one or more additional terminal devices to coordinate transmission of uplink data from the first terminal device to the network access node

FIG 261

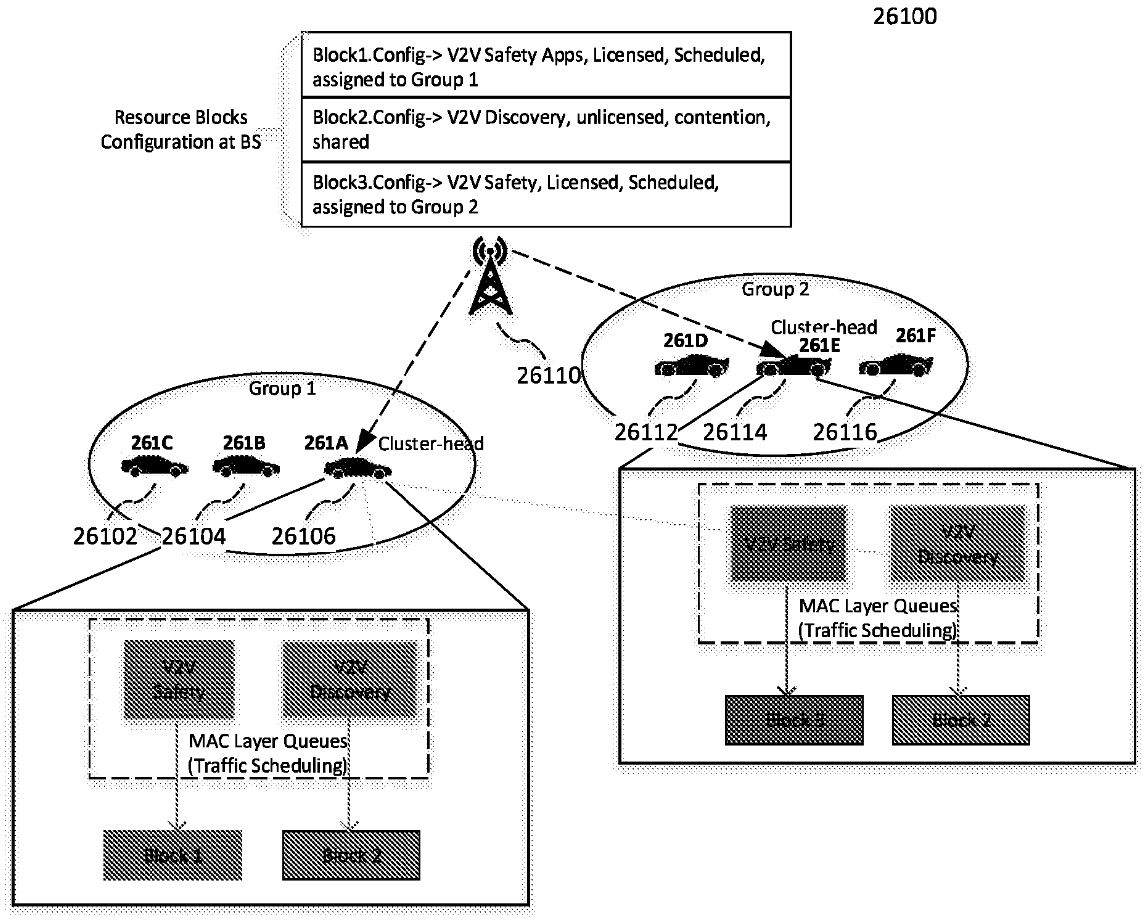
26100
Resource Blocks Configuration at BS
Block1.Config-> V2V Safety Apps, Licensed, Scheduled, assigned to Group 1
Block2.Config-> V2V Discovery, unlicensed, contention, shared
Block3.Config-> V2V Safety, Licensed, Scheduled, assigned to Group 2
Group 2
Cluster-head
261D
261E
261F
26110
Group 1
261C
261B
261A
Cluster-head
26112
26114
26116
26102
26104
26106
V2V Safety
V2V Discovery
MAC Layer Queues (Traffic Scheduling)
Block 3
Block 2
Block 1

FIG 262

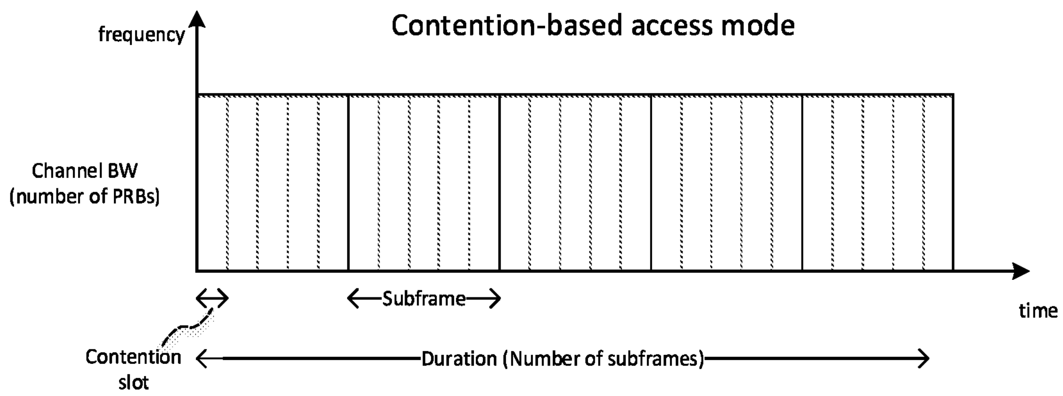
frequency
Contention-based access mode
Channel BW
(number of PRBs)
Subframe
time
Contention
slot
Duration (Number of subframes)

FIG 263

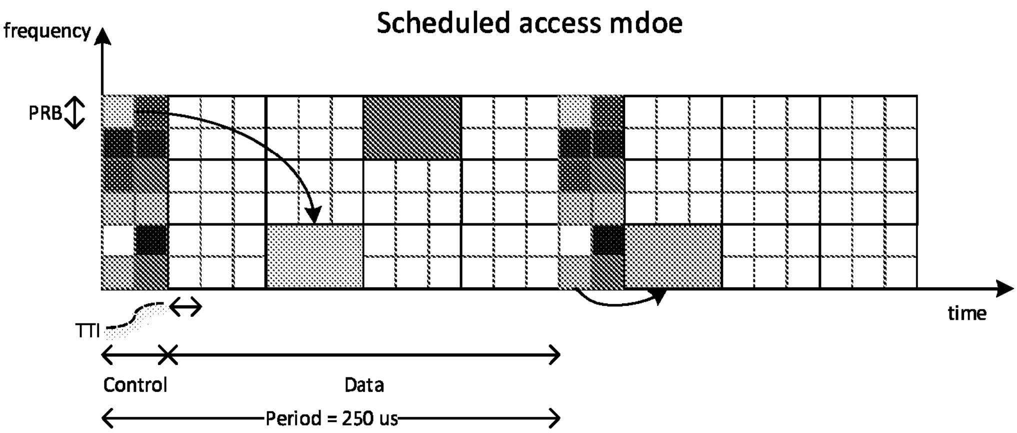
Scheduled access mdoe
frequency
PRB
TTI
time
Control
Data
Period = 250 us

FIG 264

| | |
|---|---|
| Group ID | Resource Pool Configuration Information |

FIG 265

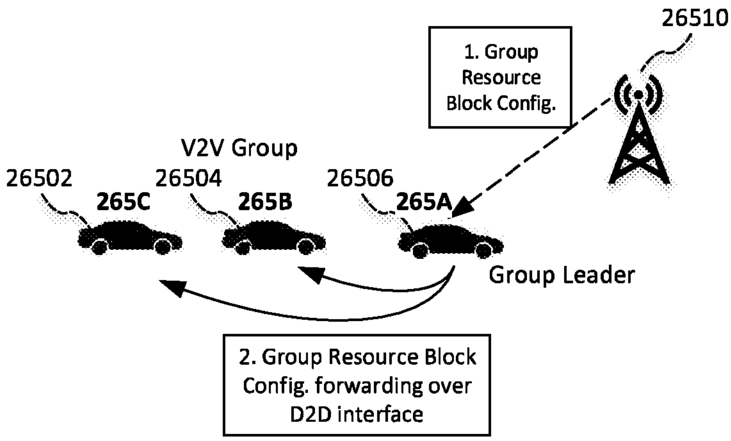
26510
1. Group Resource Block Config.
V2V Group
26502
265C
26504
265B
26506
265A
Group Leader
2. Group Resource Block Config. forwarding over D2D interface

FIG 266

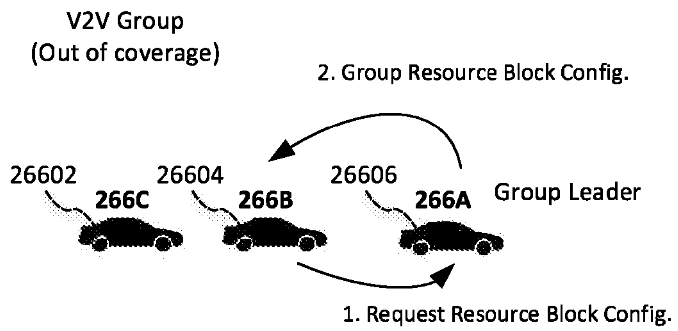
V2V Group
(Out of coverage)
2. Group Resource Block Config.
26602
266C
26604
266B
26606
266A
Group Leader
1. Request Resource Block Config.

FIG 267

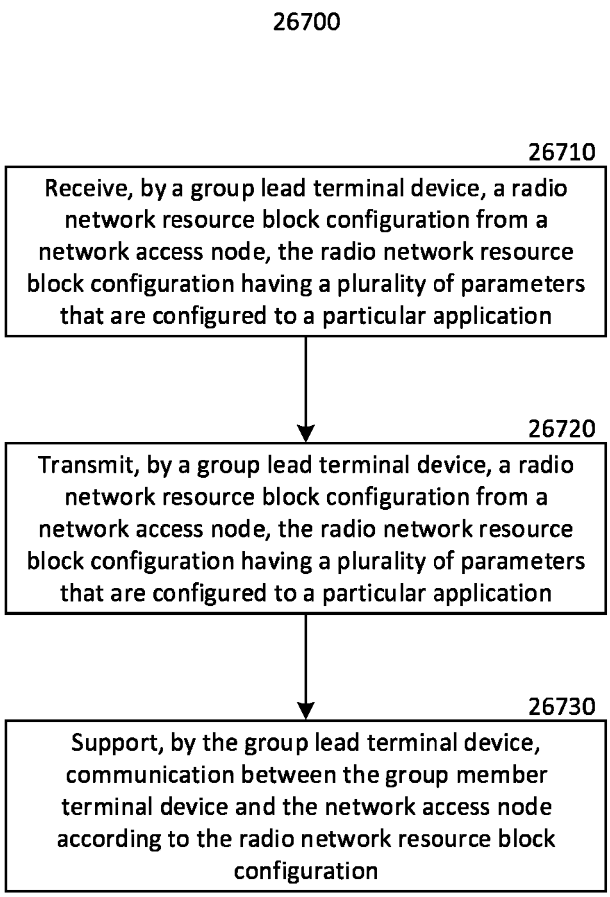
26700
26710
Receive, by a group lead terminal device, a radio network resource block configuration from a network access node, the radio network resource block configuration having a plurality of parameters that are configured to a particular application
26720
Transmit, by a group lead terminal device, a radio network resource block configuration from a network access node, the radio network resource block configuration having a plurality of parameters that are configured to a particular application
26730
Support, by the group lead terminal device, communication between the group member terminal device and the network access node according to the radio network resource block configuration

FIG 268

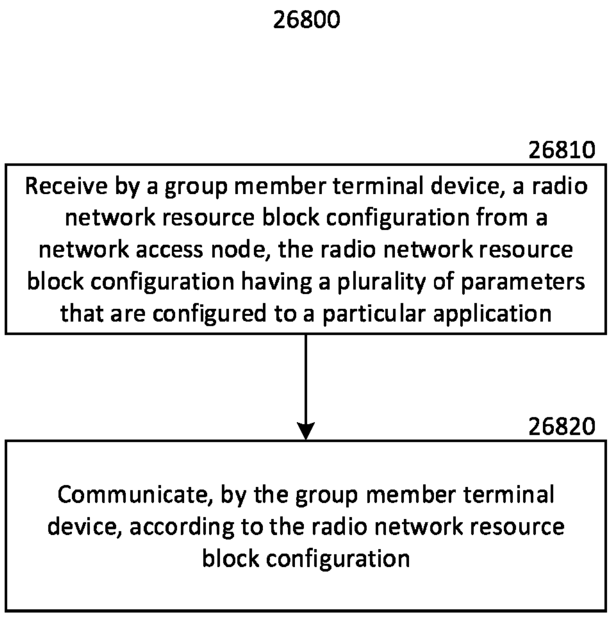
26800
26810
Receive by a group member terminal device, a radio network resource block configuration from a network access node, the radio network resource block configuration having a plurality of parameters that are configured to a particular application
26820
Communicate, by the group member terminal device, according to the radio network resource block configuration

# FIG 269

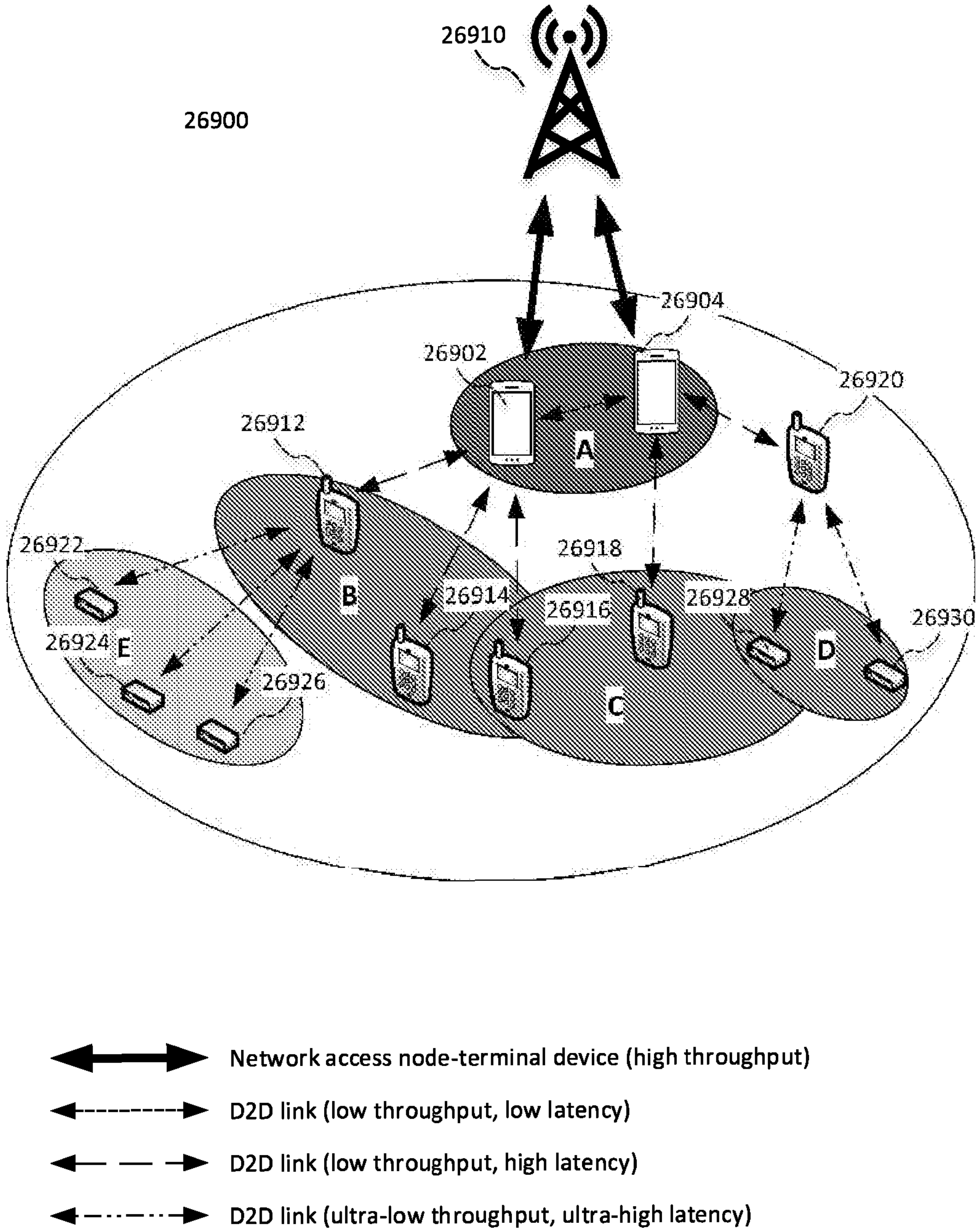
26910
26900
26904
26902
26920
26912
A
26922
26918
B
26914
26916
26928
26930
26924
E
D
26926
C
Network access node-terminal device (high throughput)
D2D link (low throughput, low latency)
D2D link (low throughput, high latency)
D2D link (ultra-low throughput, ultra-high latency)

# FIG 270

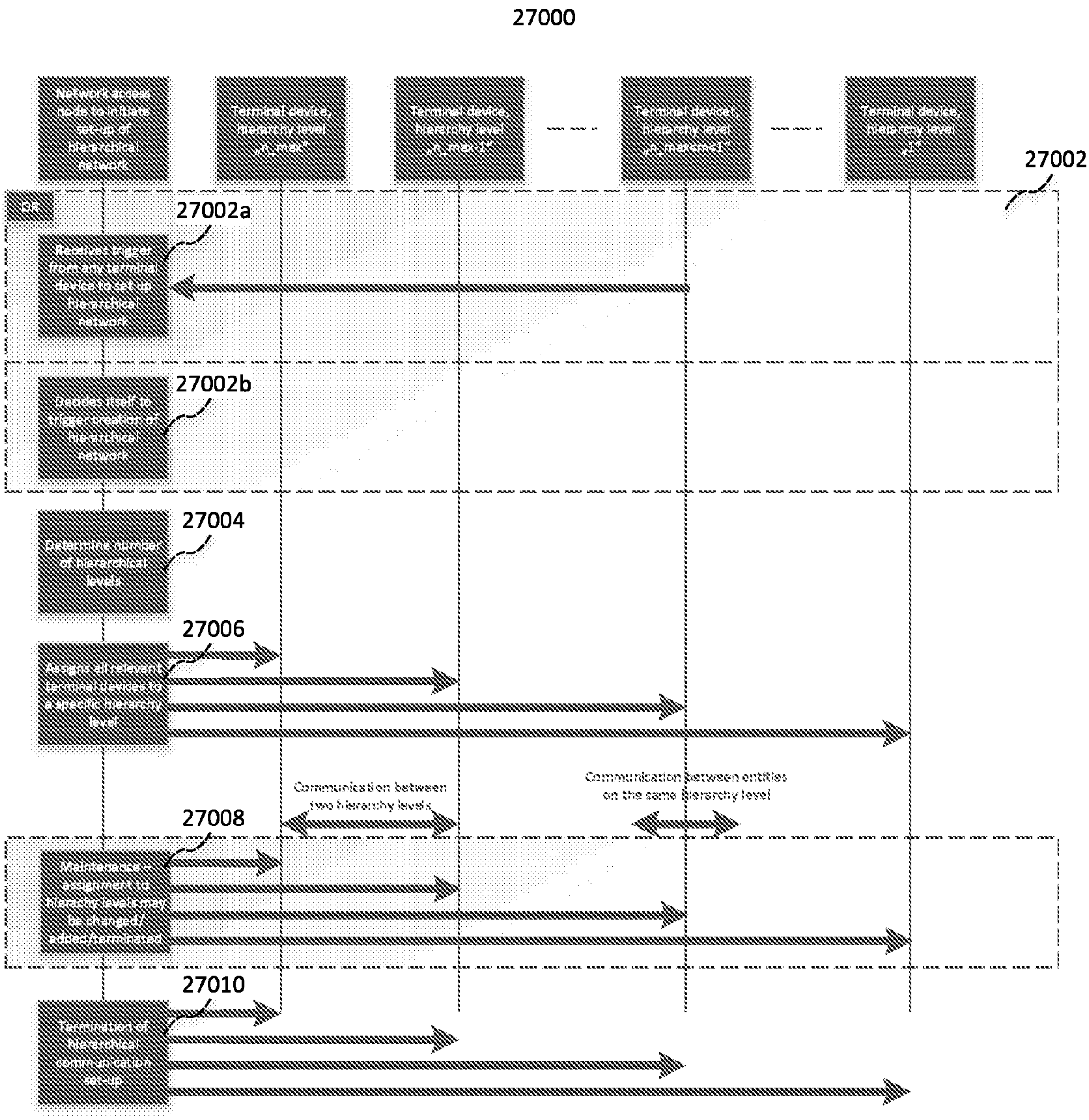
27000
Network access node to initiate set-up of hierarchical network
Terminal device, hierarchy level „n_max"
Terminal device, hierarchy level „n_max-1"
Terminal device, hierarchy level „n_max-m+1"
Terminal device, hierarchy level „1"
27002
OR
27002a
Receives trigger from any terminal device to set up hierarchical network
27002b
Decides itself to trigger creation of hierarchical network
27004
Determine number of hierarchical levels
27006
Assigns all relevant terminal devices to a specific hierarchy level
Communication between two hierarchy levels
Communication between entities on the same hierarchy level
27008
Maintenance – assignment to hierarchy levels may be changed/ added/terminated
27010
Termination of hierarchical communication set-up

FIG 271

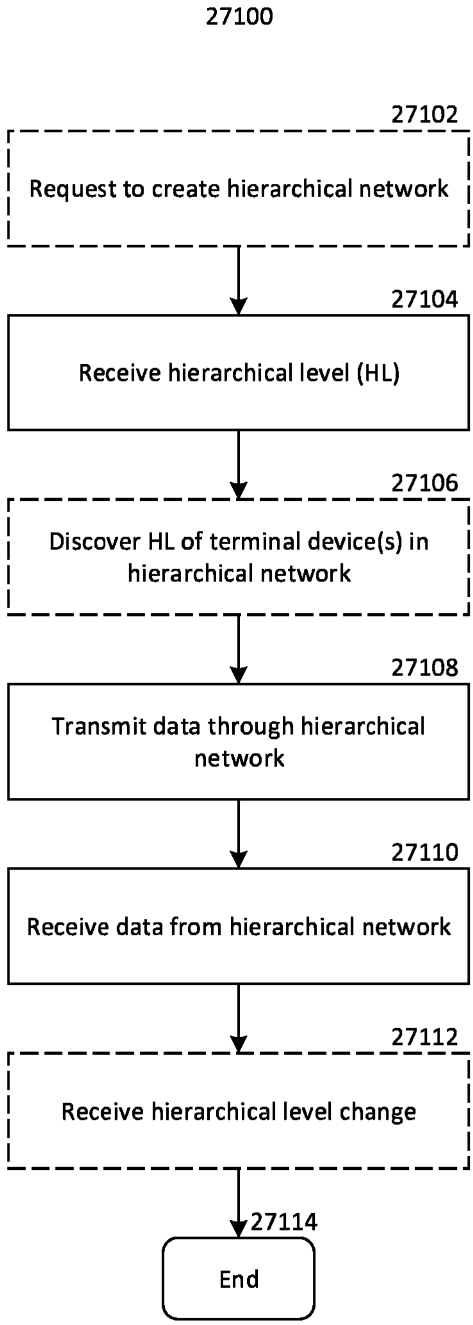
27100
27102
Request to create hierarchical network
27104
Receive hierarchical level (HL)
27106
Discover HL of terminal device(s) in hierarchical network
27108
Transmit data through hierarchical network
27110
Receive data from hierarchical network
27112
Receive hierarchical level change
27114
End

FIG 272

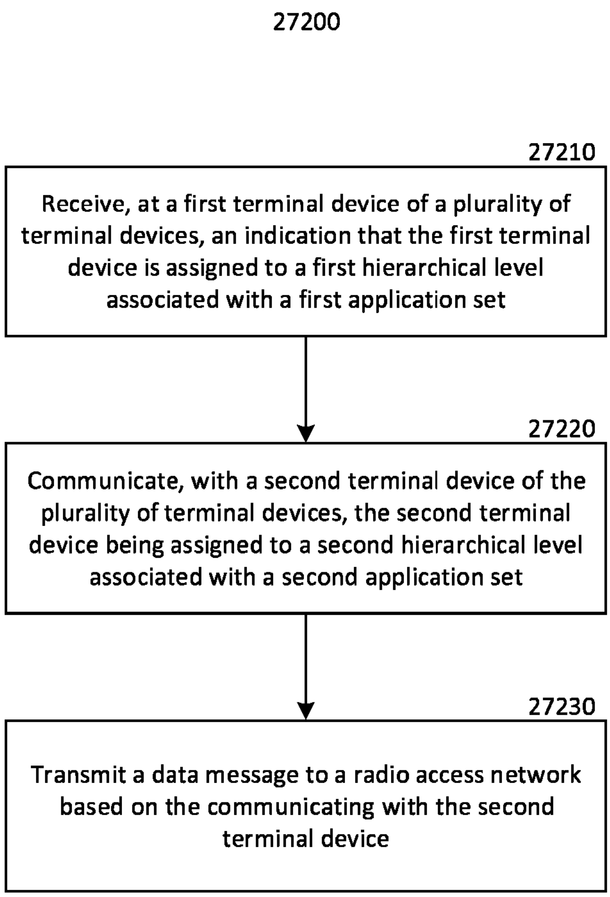
27200
27210
Receive, at a first terminal device of a plurality of terminal devices, an indication that the first terminal device is assigned to a first hierarchical level associated with a first application set
27220
Communicate, with a second terminal device of the plurality of terminal devices, the second terminal device being assigned to a second hierarchical level associated with a second application set
27230
Transmit a data message to a radio access network based on the communicating with the second terminal device

FIG 273

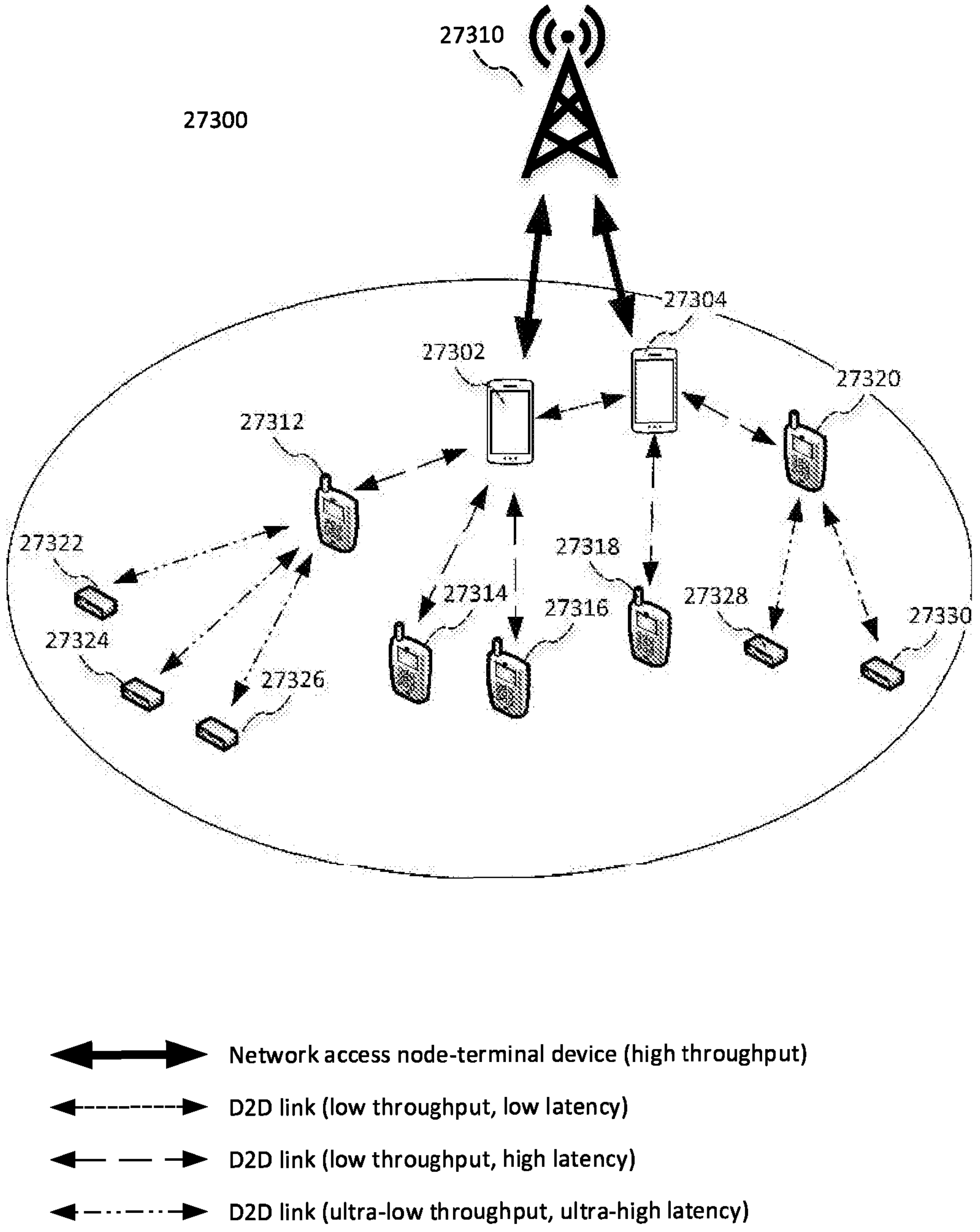
27310
27300
27304
27302
27320
27312
27322
27318
27314
27328
27316
27330
27324
27326
Network access node-terminal device (high throughput)
D2D link (low throughput, low latency)
D2D link (low throughput, high latency)
D2D link (ultra-low throughput, ultra-high latency)

FIG 274

27410

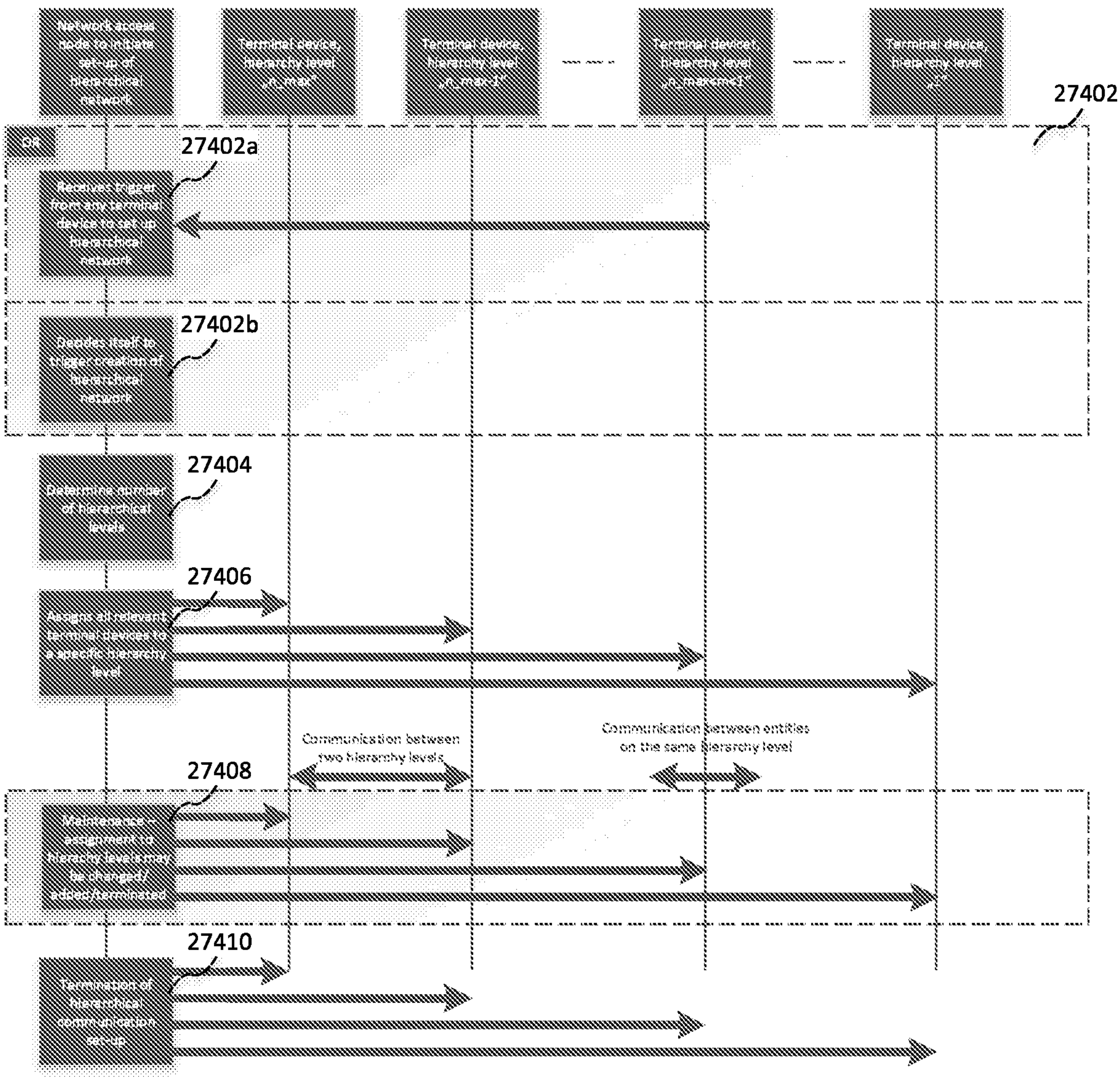

FIG 275

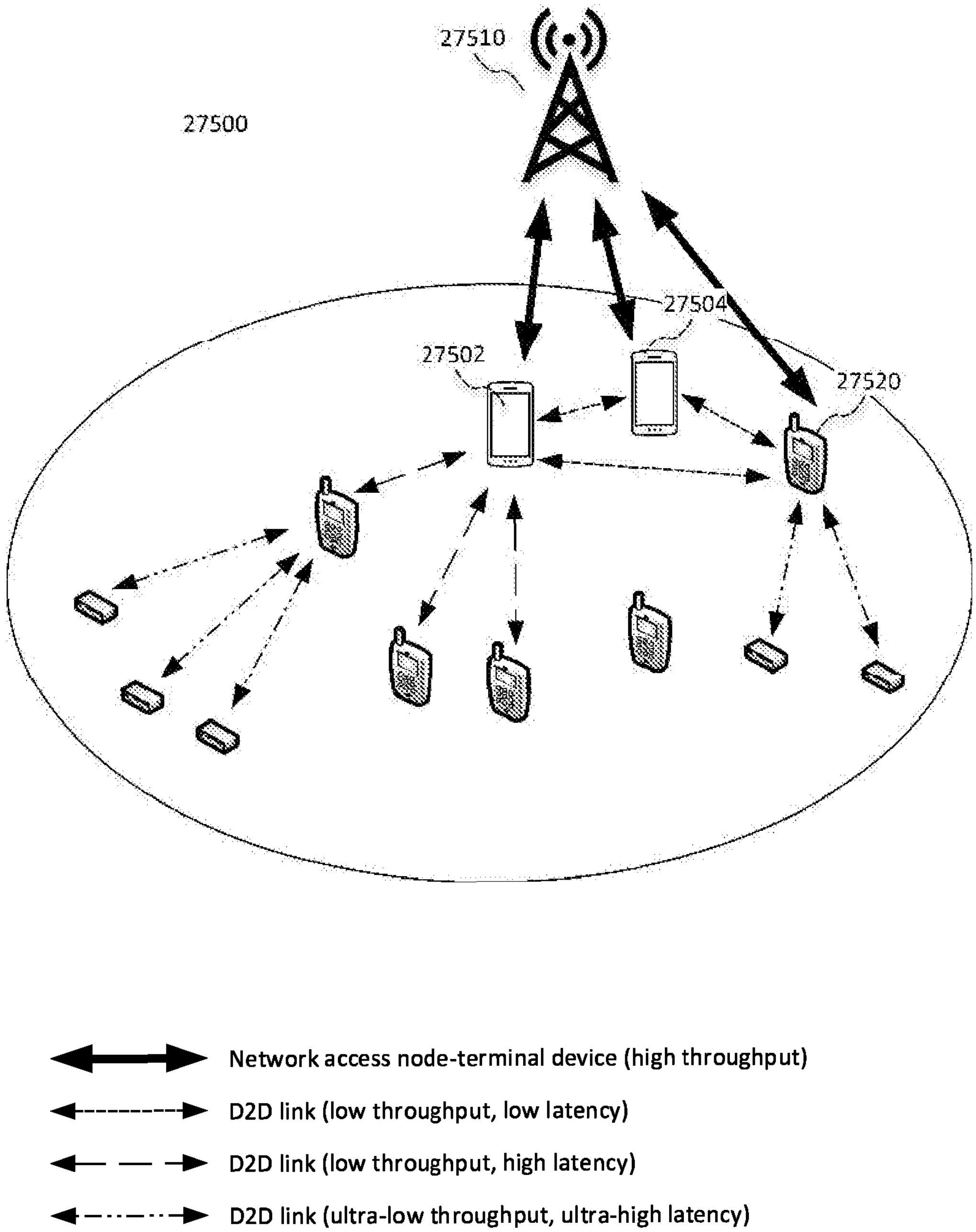
27510
27500
27504
27502
27520
Network access node-terminal device (high throughput)
D2D link (low throughput, low latency)
D2D link (low throughput, high latency)
D2D link (ultra-low throughput, ultra-high latency)

# FIG 276

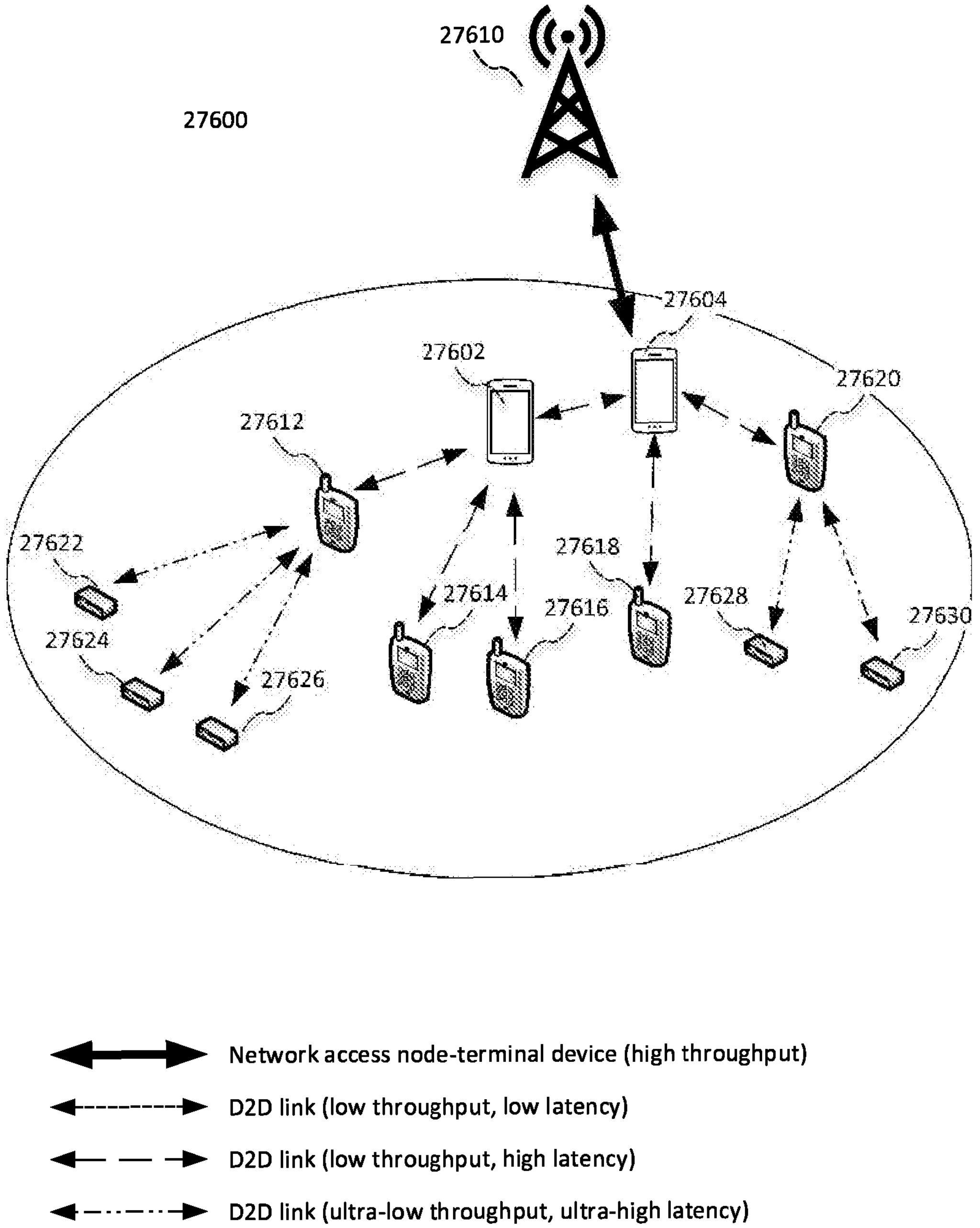
27610
27600
27604
27602
27620
27612
27622
27618
27614
27616
27628
27630
27624
27626
Network access node-terminal device (high throughput)
D2D link (low throughput, low latency)
D2D link (low throughput, high latency)
D2D link (ultra-low throughput, ultra-high latency)

FIG 277

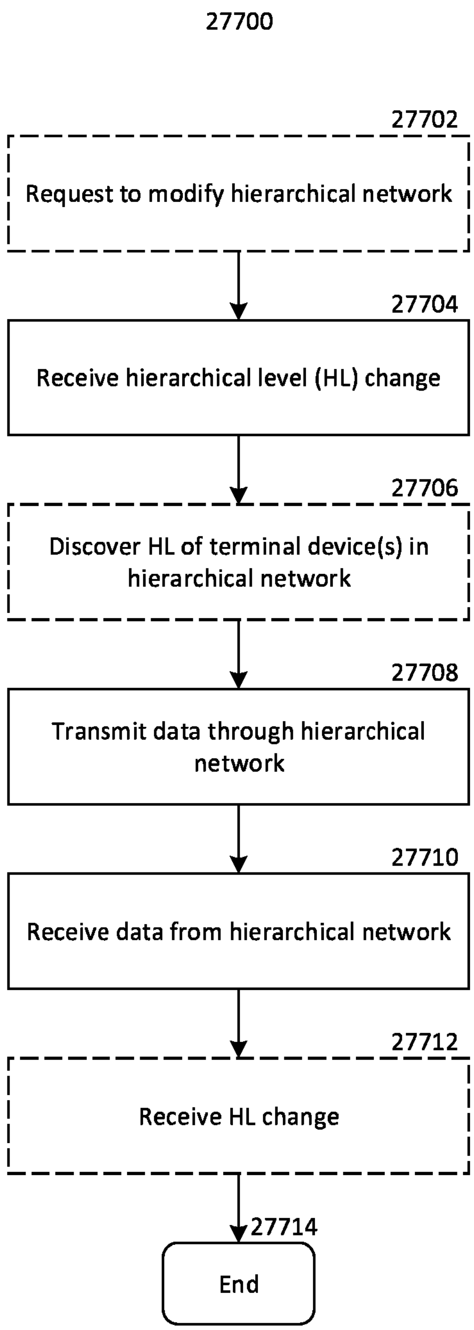
27700
27702
Request to modify hierarchical network
27704
Receive hierarchical level (HL) change
27706
Discover HL of terminal device(s) in hierarchical network
27708
Transmit data through hierarchical network
27710
Receive data from hierarchical network
27712
Receive HL change
27714
End

FIG 278

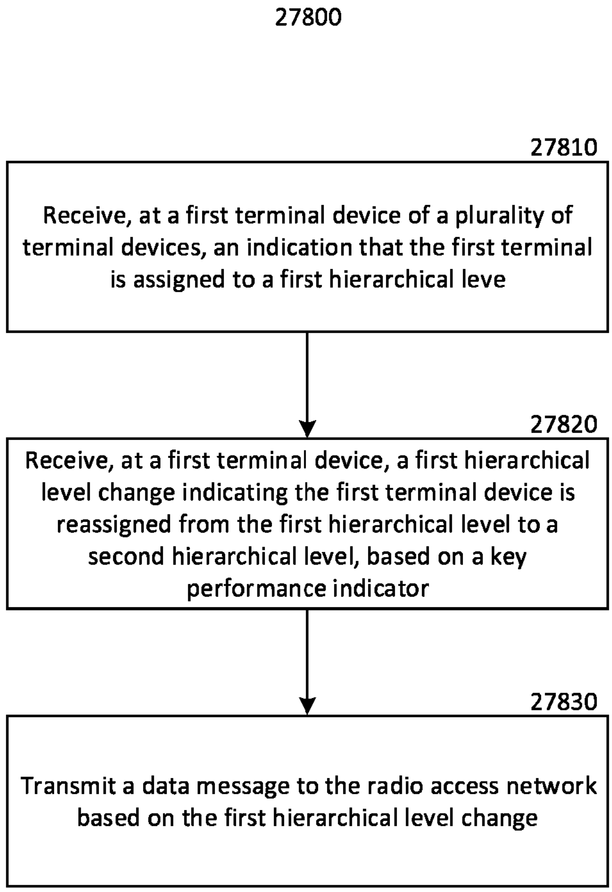
27800
27810
Receive, at a first terminal device of a plurality of terminal devices, an indication that the first terminal is assigned to a first hierarchical leve
27820
Receive, at a first terminal device, a first hierarchical level change indicating the first terminal device is reassigned from the first hierarchical level to a second hierarchical level, based on a key performance indicator
27830
Transmit a data message to the radio access network based on the first hierarchical level change

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62440501
- US 2014177496 A1


### Non-patent literature cited in the description


- **NITHI NACHI K et al.** BELL LABS TECHNICAL JOURNAL. WILEY, 01 March 2011, vol. 15, 149-168
- Physical Channels and modulation. *3GPP TS 36.211*